(19) Europäisches Patentamt
European Patent Office
Office européen des brevets

(11) Publication number: **0 636 996 A2**

(12) # EUROPEAN PATENT APPLICATION

(21) Application number: **94304519.5**

(22) Date of filing: **21.06.94**

(51) Int. Cl.[6]: **G06K 9/46**, A61B 5/117

A request for correction and addition on two pages has been filed pursuant to Rule 88 EPC. A decision on the request will be taken during the proceedings before the Examining Division (Guidelines for Examination in the EPO, A-V, 3.). The application is published incomplete as filed (Art.93 (2) EPC. The point inthe description at which the omission obviously occurs has been left blank.

A request for corrections and the addition of missing text at the end of the description (after "in CPSDAT,...") has been filed pursuant to Rule 88 EPC. A decision on the request will be taken during the proceedings before the Examining Division (Guidelines for Examination in the EPO, A-V, 3.).

(30) Priority: **21.07.93 IL 10644393**

(43) Date of publication of application:
**01.02.95 Bulletin 95/05**

(84) Designated Contracting States:
**AT BE CH DE DK ES FR GB GR IE IT LI LU MC NL PT SE**

(71) Applicant: **PERSONIX LTD.**
**Koranit**
**Mobile Post Misgav, 20126 (IL)**

(72) Inventor: **Baruch, Orit**
**Koranit,**
**Mobile Post Misgav**
**IL-20126 (IL)**

(74) Representative: **Hillier, Peter et al**
**Reginald W. Barker & Co.,**
**Chancery House,**
**53-64, Chancery Lane**
**London, WC2A 1OU (GB)**

(54) **Apparatus and method for topological processing of fingerprints.**

(57) Apparatus for processing a topological representation of a fingerprint, the apparatus including a topological fingerprint representation generation unit operative to generate a topological representation of a fingerprint including for each node along a ridge-representing graph, an indication of all neighboring nodes along the ridge-representing graph.

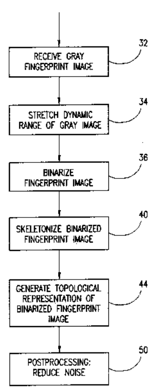


FIG.1

EP 0 636 996 A2

## FIELD OF THE INVENTION

The present invention relates to apparatus and methods for processing images of fingerprints.

## BACKGROUND OF THE INVENTION

The following publications describe fingerprint processing, including applications of topology to fingerprint processing:

Chen, Z. and Kuo, C. H., "A topology-based matching algorithm for fingerprint authentication", Proceedings 25th Annual 1991 IEEE International Carnahan Conference on Security Technology, pp. 84 - 87. "Automated fingerprint recognition using structural matching", A. K. Hrechak and J. A. McHugh, Pattern Recognition, 23(8), pp. 893 - 904, 1990; and

"Fingerprint identification using graph matching", D. K. Isenor, S. G. Zaky, Pattern Recognition, Vol. 19 (2), pp. 113 - 122, 1986.

Qingham Xiao and Rafaat, H., "Fingerprint Image Post-processing: A Combined Statistical and Structural Approach", Pattern Recognition, Vol. 24, Iss. 10, 1991, pp. 985-992;

K. Asai, Y. Hoshino, N. Yamashita and S. Hiratsuka, "Fingerprint Identification System", Second USA-Japan, Computer Conference, 1975.

Other U.S. patents describing the state of the art of the present invention are: U.S. Patent 4,185,270 to Fischer II et al; U.S. Patents 4,581,760; 4,618,988; 4,696,046 and 4,752,966 to Schiller; U.S. patent 4,896,363 to Taylor et al; 4,947,442 to Tanaka et al; and 5,067,162 to Driscoll et al.

Graph theory is described in the following publication, the disclosre of which is incorporated herein by reference:

Harary, F., "Graph Theory", Reading MA., Addison-Wesley, 1969.

Other publications generally illustrating the state of the art are the following, the disclosures of which are hereby incorporated by reference:

A. K. Jain, "Fundamentals of Digital Image Processing", Prentice-Hall, Inc., 1989;

Gonzalez, R. and Wood, R. E., "Digital Image Processing", Addison-Wesley, 1992;

Gotlieb, C. C. and Gotlieb, L. R. Data types and structures, Prentice-Hall, Inc., Englewood Cliffs, NJ, pp. 49 -53;

Berge, C. "Graphs and Hypergraphs", 2nd Revised Ed., New York, American Elsevier, 1976;

Ballard, D.H. and C.M. Brown, "Computer Vision", Prentice-Hall, 1982;

Jim Piper, "Efficient Implementation of Skeletonization Using Interval Coding", Pattern Recognition Letters 3, 1985, pp. 389-397; and

E.R. Davies and A.P.N. Plummer, "Thinning Algorithms: A Critique and a New Methodology", Pattern Recognition, Vol. 14, 1 - 6, 1981, pp. 53 - 63.

## SUMMARY OF THE INVENTION

The present invention seeks to provide an improved system for processing fingerprint images.

There is thus provided in accordance with a preferred embodiment of the present invention apparatus for processing a topological representation of a fingerprint, the apparatus including a topological fingerprint representation generation unit operative to generate a topological representation of a fingerprint including for each node along a ridge-representing graph, an indication of all neighboring nodes along the ridge-representing graph.

There is further provided in accordance with a preferred embodiment of the present invention apparatus for fingerprint verification including a fingerprint representation unit operative to provide two topological representations of two respective fingerprints, and a topological fingerprint representation comparison unit operative to compare the two topological representations of the two respective fingerprints and to provide an output indication of the extent of similarity therebetween.

Still further in accordance with a preferred embodiment of the present invention the output indication includes a binary indication of whether or not the fingerprints are considered identical.

Additionally provided in accordance with a preferred embodiment of the present invention is a topological fingerprint bank including a topologically represented fingerprint bank in which is stored at least one topological representation of at least one fingerprint. Alternatively, each individual's topological fingerprint representation may be stored on a portable ID card such as a magnetic card, smart card, or paper card.

Further in accordance with a preferred embodiment of the present invention each at least one topological representation includes, for each node along a ridge-representing graph, an indication of all neighboring nodes along the ridge-representing graph.

Still further in accordance with a preferred embodiment of the present invention the topological representation includes at least one tree.

Yet further in accordance with a preferred embodiment of the present invention the topological representation includes a forest of trees.

Additionally in accordance with a preferred embodiment of the present invention the forest of trees includes a forest of binary trees.

Further in accordance with a preferred embodiment of the present invention each tree represents a fingerprint ridge.

There is also provided in accordance with a preferred embodiment of the present invention a method for processing a topological representation of a fingerprint, the method including the steps of generating a topological representation of a fingerprint including, for each node along a ridge-representing graph, an indication of all neighboring nodes along the ridge-representing graph.

There is additionally provided in accordance with a preferred embodiment of the present invention a method for fingerprint verification including receiving two topological representations of two respective fingerprints, and subsequently comparing the two topological representations of the two respective fingerprints and providing an output indication of the extent of similarity therebetween.

Further in accordance with a preferred embodiment of the present invention the method also includes, prior to the comparing step, the step of aligning the two topological representations of the two respective fingerprints.

There is yet further provided in accordance with a preferred embodiment of the present invention a method for enhancing a topological representation of a fingerprint, the method including the steps of providing a topological representation of a fingerprint including a multiplicity of nodes, processing the topological representation of the fingerprint so as to eliminate at least one impossible topological feature therefrom.

Further in accordance with a preferred embodiment of the present invention the step of processing includes the step of repeating, for each of a plurality of node pairs from among the multiplicity of nodes, the steps of determining whether the node pair defines an impossible pair, and if the node pair is an impossible pair, deleting the node pair and modifying the remaining nodes to adjust for the deleted node pair.

Additionally provided in accordance with a preferred embodiment of the present invention is a method for binarizing gray level images including at least one elongate configuration, the method including the steps of receiving a gray level image, locating at least one elongate configuration in the gray level image, moving along the at least one elongate configuration, binarizing the at least one elongate configuration in the course of moving therealong, and providing an indication of at least one binarized elongate configuration.

Additionally in accordance with a preferred embodiment of the present invention the step of providing includes the step of storing an indication of at least one binarized elongate configuration.

Also in accordance with a preferred embodiment of the present invention the step of providing includes the step of providing an output indication of at least one binarized elongate configuration.

Still further in accordance with a preferred embodiment of the present invention the step of receiving includes the step of receiving a gray level image of a fingerprint.

Additionally in accordance with a preferred embodiment of the present invention the step of receiving includes the step of receiving a gray level image of at least one character or the step of receiving a gray level image of at least a portion of a printed circuit.

There is also provided in accordance with a preferred embodiment of the present invention a method for matching fingerprints including providing at least two fingerprints from each of a multiplicity of individuals, deriving a plurality of fingerprint characteristics from each fingerprint, statistically analyzing the plurality of fingerprint characteristics, thereby to identify a subset of fingerprint characteristics which predict a fingerprint match, and constructing fingerprint matching apparatus operative to match first and second fingerprints on the basis of the subset of fingerprint characteristics.

Further provided in accordance with a preferred embodiment of the present invention is a method for identifying fingerprint quality including the steps of providing a plurality of prints of an individual finger, matching each pair of prints from among the plurality of prints, and selecting the print, from among the plurality of prints, which best matches the remaining prints.

Still further in accordance with a preferred embodiment of the present invention the method also includes the step of disqualifying the best matching print if the best matching print does not match the

remaining prints well enough, when compared to a predetermined matching adequacy threshold.

There is additionally provided in accordance with a preferred embodiment of the present invention a fingerprint matching method including the steps of comparing a first fingerprint image of known quality to a second fingerprint image, thereby to provide a similarity score, and providing an output indication that the first and second fingerprint images match if the similarity score exceeds a predetermined similarity threshold, wherein the predetermined similarity threshold is selected in accordance with the known quality of the first fingerprint image.

Further provided in accordance with a preferred embodiment of the present invention is a method for processing a topological representation of a fingerprint, the method including the steps of generating a topological representation of a fingerprint including for each node along a ridge-representing graph, an indication of all neighboring nodes along the ridge-representing graph.

Still further in accordance with a preferred embodiment of the present invention the generating step is performed for each of a plurality of prints of an individual finger, and also including the step of combining the topological representations of the plurality of prints into a single topological representation.

There is further provided in accordance with a preferred embodiment of the present invention apparatus for processing a topological representation of a fingerprint, the apparatus including apparatus for generating a topological representation of a fingerprint including, for each node along a ridge-representing graph, an indication of all neighboring nodes along the ridge-representing graph.

There is still further provided in accordance with a preferred embodiment of the present invention apparatus for fingerprint verification including apparatus for receiving two topological representations of two respective fingerprints, and subsequently comparing the two topological representations of the two respective fingerprints and providing an output indication of the extent of similarity therebetween.

Additionally provided in accordance with a preferred embodiment of the present invention is apparatus for enhancing a topological representation of a fingerprint, the apparatus including apparatus for providing a topological representation of a fingerprint including a multiplicity of nodes, processing the topological representation of the fingerprint so as to eliminate at least one impossible topological feature therefrom.

Further provided in accordance with a preferred embodiment of the present invention is apparatus for binarizing gray level images including at least one elongate configuration, the apparatus including apparatus for receiving a gray level image, locating at least one elongate configuration in the gray level image, moving along the at least one elongate configuration, binarizing the at least one elongate configuration in the course of moving therealong, and providing an indication of at least one binarized elongate configuration.

There is still further provided in accordance with a preferred embodiment of the present invention apparatus for matching fingerprints including apparatus for providing at least two fingerprints from each of a multiplicity of individuals, deriving a plurality of fingerprint characteristics from each fingerprint, statistically analyzing the plurality of fingerprint characteristics, thereby to identify a subset of fingerprint characteristics which predict a fingerprint match, and constructing fingerprint matching apparatus operative to match first and second fingerprints on the basis of the subset of fingerprint characteristics.

There is additionally provided in accordance with a preferred embodiment of the present invention apparatus for identifying fingerprint quality including apparatus for providing a plurality of prints of an individual finger, matching each pair of prints from among the plurality of prints, and selecting the print, from among the plurality of prints, which best matches the remaining prints.

There is yet further provided in accordance with a preferred embodiment of the present invention a fingerprint matching apparatus including apparatus for comparing a first fingerprint image of known quality to a second fingerprint image, thereby to provide a similarity score, and providing an output indication that the first and second fingerprint images match if the similarity score exceeds a predetermined similarity threshold, wherein the predetermined similarity threshold is selected in accordance with the known quality of the first fingerprint image.

There is additionally provided in accordance with a preferred embodiment of the present invention apparatus for processing a topological representation of a fingerprint, the apparatus including apparatus for generating a topological representation of a fingerprint including for each node along a ridge-representing graph, an indication of all neighboring nodes along the ridge-representing graph.

There is further provided in accordance with a preferred embodiment of the present invention apparatus for sampling a fingerprint including a fingerprint imager operative to repeatedly image a fingerprint, a fingerprint quality characteristic analyzer operative to analyze at least one fingerprint quality characteristic and to select a fingerprint image whose quality characteristic answers to a predetermined criterion.

BRIEF DESCRIPTION OF THE DRAWINGS

The present invention will be understood and appreciated from the following detailed description, taken in conjunction with the drawings in which:

Fig. 1 is a simplified flowchart of a method, provided in accordance with a preferred embodiment of the present invention, for creating a topological representation of a fingerprint;

Fig. 2A is a pictorial illustration of a portion of a fingerprint, shown binarized, for simplicity, which includes five ridges;

Fig. 2B is a diagrammatic illustration of a forest of five binary trees respectively representing the five ridges in the fingerprint of Fig. 2A;

Fig. 3 is a topological representation of a fingerprint including a "lake";

Fig. 4 is a simplified flowchart of a preferred method for binarizing a gray level fingerprint;

Fig. 5 is a pictorial illustration of a sample section of gray levels;

Fig. 6 is a simplified flowchart of a preferred method for implementing IS__PIXEL__ON__RIDGE;

Fig. 7 is a simplified flowchart illustrating a preferred method for generating a topological representation of a fingerprint image; Fig. 8 is a simplified flowchart of a recursive tree building process employed in the method of Fig. 7;

Fig. 9A is a diagrammatic illustration of a topological representation of a fingerprint, derived from the topological representation of Fig. 2B;

Fig. 9B is a pictorial illustration which corresponds to the topological representation of Fig. 9A;

Fig. 10A is a diagrammatic illustration of a topological representation of a fingerprint, derived from the topological representation of Fig. 9A;

Fig. 10B is a pictorial illustration which corresponds to the topological representation of Fig. 10A;

Fig. 11 is a pictorial illustration defining parameters used to define a preferred criterion for identifying erroneously split ridges;

Fig. 12A is a diagrammatic illustration of a topological representation of a fingerprint, derived from the topological representation of Fig. 10A;

Fig. 12B is a pictorial illustration which corresponds to the topological representation of Fig. 12A;

Fig. 13 is a simplified flowchart of a sample post-processing method for identifying and eliminating several types of inappropriate configurations;

Fig. 14 is a simplified flowchart of a method for determining whether a current pair is a false limb;

Fig. 15 is a simplified flowchart of a method for eliminating false limbs;

Fig. 16 is a simplified block diagram illustration of topological fingerprint verification apparatus constructed and operative in accordance with a preferred embodiment of the present invention;

Figs. 17A and 17B taken together, form a simplified flowchart illustration of a fingerprint verification method provided in accordance with a preferred embodiment of the present invention;

Fig. 18 is a simplified flowchart illustrating a preferred method for performing alignment step 170 of Fig. 17B;

Fig. 19 is a simplified flowchart illustrating a preferred method for performing matching step 180 of Fig. 17B;

Fig. 20 is a simplified block diagram of fingerprint processing apparatus constructed and operative in accordance with a preferred embodiment of the present invention;

Fig. 21 is a flowchart describing a preferred method of operation for fingerprint analyzer 410 of Fig. 20;

Fig. 22 is a simplified flowchart of a preferred method for analyzing fingerprint image quality;

Figs. 23A and 23B are diagrams helpful in understanding steps 540 and 560 of the method of Fig. 22;

Fig. 24 is a simplified flowchart of a preferred method for performing step 500 of Fig. 21;

Fig. 25A is a diagram of a line following situation wherein the line intersects with the window;

Fig. 25B is a diagram of a line following situation wherein the line ends inside the window;

Fig. 25C is a diagram of a line following situation wherein the line splits inside the window; and

Figs. 26A - 26D are diagrams of a sequence of windows defined while following a line when $d = 2$ and the resulting thinned output.

Attached herewith are the following appendices which aid in the understanding and appreciation of one preferred embodiment of the invention shown and described herein:

Appendix A is a hexadecimal computer listing of an executable file, entitled "enroll.dmp" and comprising a preferred software implementation of a fingerprint enrolling method provided in accordance with a first preferred embodiment of the present invention;

Appendix B is a hexadecimal computer listing of an executable file, entitled "extract.dmp" and comprising a preferred software implementation of a fingerprint data extraction method provided in

accordance with a preferred embodiment of the present invention;

Appendix C is a hexadecimal computer listing of an executable file, entitled "match.dmp" and comprising a preferred software implementation of a fingerprint data matching method provided in accordance with a preferred embodiment of the present invention;

Appendix D is a hexadecimal computer listing of an executable file, entitled "b_enroll.dmp" and comprising a preferred software implementation of a fingerprint enrolling method provided in accordance with a second preferred embodiment of the present invention; and

Appendix E is a hexadecimal computer listing of an executable file, entitled "sample.dmp" and comprising a preferred software implementation of an automatic fingerprint sampling method provided in accordance with a preferred embodiment of the present invention.

DETAILED DESCRIPTION OF PREFERRED EMBODIMENTS

Reference is now made to Fig. 1 which illustrates a method, provided in accordance with a preferred embodiment of the present invention, for creating a topological representation of a fingerprint. The topological representation of the fingerprint preferably includes a graph, such as a disconnected graph, each disconnected component of which comprises a topological representation of an individual fingerprint ridge. For example, the topological representation of the fingerprint may comprise a forest of binary trees, each binary tree corresponding to a ridge of the fingerprint, each node of an individual binary tree corresponding to a fork or endpoint of the ridge corresponding to the individual binary tree.

For example, Fig. 2A is a pictorial illustration of a portion of a fingerprint, shown binarized, for simplicity, which includes five ridges, referenced as R1 to R5. Twenty-two fork and endpoint locations are defined along the ridges R1 to R5 and are also referred to herein as "minutiae". The 22 minutiae are referenced as N1 to N22. For example, N1 is an endpoint location, N10 is a fork location located at a fork between three limbs whose endpoints are N9, N11 and N12, and N14 is a fork location located at a fork between another fork location N15 and two limbs whose endpoints are N13 and N20, respectively.

Fig. 2B is a diagrammatic illustration of a forest of five binary trees respectively representing the five ridges in the fingerprint of Fig. 2A.

Referring again to Fig. 1, the method of the present invention preferably includes the following steps:

STEP 32: Receive an image of a fingerprint which typically comprises a gray level image which may, for example, be provided by using conventional fingerprint sampling equipment which may include:

a. A fingerprint reader such as the DFR-90, commercially available from Identicator Corporation, Marina, Del Rey, CA, in conjunction with:

b. A frame grabber such as the PCVISIONplus, commercially available from Imaging Technology, Inc., Woburn, MA.

STEP 34: The dynamic range of the gray fingerprint image provided in step 32 is stretched. If the gray image is represented, for example, in 8 bits per pixel, the output of step 34 preferably comprises an image whose dynamic range is from 1 to 254, in which ridges are represented with values typically exceeding 128 and valleys and background are represented with values typically falling below 128. The values 0 and 255 are reserved for binarized portions of the image, so as to allow binarized portions of the image to be easily distinguishable, relative to initially black and white portions of the image which are preferably represented using the values 1 and 254, respectively.

STEP 36: Binarize the gray level fingerprint. A preferred method for binarizing a gray level fingerprint is described herein with reference to the flowchart of Fig. 4.

A particular feature of the above-described binarizing method is that the binarizing operation identifies and travels along the elongate configurations in the gray image and accumulates information regarding the elongate configurations, in the course of traveling therealong, which is employed in the binarizing process. In contrast, conventional binarizing operations travel along the rows or columns of the gray image.

Alternatively, however, any suitable binarizing method may be employed, such as the binarizing method described in the following publication:

Gonzalez, R. C. and Woods, R. E. Digital Image Processing, Addison-Wesley, Reading, MA, 1992, pp. 443 - 458.

It is appreciated that the term "binarization", as employed herein, is irrelevant to the term "binary tree", also employed herein.

STEP 40: Optionally, skeletonize or thin the binarized fingerprint image provided in step 36 so as to provide a one-pixel thick representation of the configurations in the binarized fingerprint image.

If the binarization method of Fig. 4 is employed, step 40 may be omitted.

A suitable skeletonizing method is described in the following publication:

Piper, J. "Efficient implementation of skeletonization using interval coding", Pattern recognition letters 3, 389 - 397, 1985.

STEP 44: Use the output of step 36 or the output of optional step 40 to generate a topological representation of the fingerprint image. Preferably the topological representation comprises a graph such as a forest of binary trees, each binary tree corresponding to a ridge of the fingerprint, each node of an individual binary tree corresponding to a fork or endpoint of the ridge corresponding to the individual binary tree.

Sometimes, the topological representation generated in step 44 may include one or more graphs which include a "lake" 45, i.e. a pair of forks 46 and 47 connected by two arcs 48 and 49, as shown in Fig. 3. Alternatively, "lakes" may be deemed illegal, for example, if it is desired to represent each fingerprint ridge as a binary tree.

Optionally, additional information regarding the structure of the ridges, such as locations of curvature changes or curvature maxima along the ridge, may be added to the topological representation.

The topological representation is stored in computer memory or on secondary memory in any media such as Hard Disk or Flash memory. Any suitable scheme may be employed to store the topological representation of the fingerprint. For example, the following publication describes a conventional scheme for storing graphs such as trees:

Gotlieb, C. C. and Gotlieb, L. R. Data types and structures, Prentice-Hall, Inc., Englewood Cliffs, NJ, pp. 49 -53.

Preferably, the following information is stored for each node:

a. The coordinates of the node;

b. The identities of each neighboring node;

c. The lengths of the limbs connecting the node to each of its neighboring nodes, e.g. to its parent, right son, and left son, if all of these exist. If step 40 of Fig. 1 is performed, the length may be computed by counting pixels in the course of traveling along the skeletonized limb. Alternatively, the length may be computed by computing the distances between the centers of consecutive windows, where the term "windows" is used in the sense of the Figs. 25 and 26.

d. For each neighboring node: the angle of the tangent at the node to the limb connecting the node to its neighbor.

For example, the angle may be computed by computing the angle between the horizontal axis and a line connecting the following two points:

i. The center of a window, as defined below with reference to Figs. 25 and 26, in which the node is located; and

ii. The center of an adjacent window along the ridge connecting the node to its neighbor.

STEP 50: Optionally, postprocess the topological representation generated in step 44 so as to reduce noise therewithin. In order to postprocess the topological representation, the system typically traverses the arcs defined in the topological representation of the fingerprint. In the course of traveling along the graph, "impossible topological features" are identified, i.e. configurations which are not appropriate to the known configuration of a fingerprint. These configuration are assumed to be erroneous and are eliminated.

The present specification assumes that fingerprint ridges are represented in white whereas background and fingerprint valleys are represented in black, however, this need not be the case. For example, the color scheme for representing ridges and valleys may be reversed.

Reference is now made to Fig. 4 which is a simplified flowchart of a preferred method for performing binarization step 36 of Fig. 1 in which a binarizing window is opened around a location in a gray fingerprint image, the direction and width of a ridge identified in that window are determined, and the direction and width information are employed to binarize that window and to determine the location and size of a new window. The process is then repeated for the new window, and so on, for each new window defined, until all ridges in the gray image are binarized.

One method for determining ridge direction is by selecting, for each of a plurality of probable directions, a pixel pair lying along the individual probable direction. The probable direction corresponding to the pixel pair having the smallest gray level difference is selected to be the ridge direction.

Preferably, only probable directions are considered, rather than all directions. Probable directions are defined by considering one or more directions which are equal to or close to the direction of the ridge in the previous binarizing window.

Typically, 8 directions are used, providing a resolution of 22.5 degrees.

To find ridge width, the gray levels of the image within the binarizing window, in a direction perpendicular to the ridge direction, are considered. The resulting "section" of gray levels is analyzed to

determine ridge width, as illustrated in Fig. 5 which is a pictorial illustration of a sample section of gray levels.

A simpler method for finding ridge width which gives good results is based on the (ridge traversal) method, described below with reference to Figs. 25 and 26, and comprises the step of computing the distance between a pointer $L_p$ to the left edge of the ridge and a pointer $R_p$ to the right edge of the ridge, where left and right are defined relative to the direction in which the ridge is being traced.

A preferred method for determining the location and size of a new window once the current window has been binarized is described below with reference to Figs. 25 and 26.

In Fig. 4:

RIDGE__HISTORY = an array which stores ridge information pertaining to a plurality of the most recent binarizing windows, such as the 5 most recent windows.

IS__PIXEL__ON__RIDGE = a logical function which returns TRUE if the pixel is on an unbinarized ridge and FALSE otherwise.

Reference is made briefly to Fig. 6 which is a simplified flowchart of a preferred method for implementing IS__PIXEL__ON__RIDGE.

BIN__REST = a process in which pixels whose values are low, e.g. below a threshold such as 128, are set to be 0, and, preferably, pixels whose values are high, e.g. above a threshold such as 128, are set to be 255.

SET__INITIAL-WINDOW(x,y) = a process in which an initial binarizing window is opened around a pixel (x,y). The size of the window is typically 2R x 2R, where R is an estimate of the average ridge width.

IS__FORK = a logical function which determines whether a current window includes a fork location.

IS__ENDING = a logical function which determines whether a current window includes an endpoint location.

NEXT__WINDOW = open a new binarizing window.

In step 60, the direction and width of the ridge portion contained within the current binarizing window is determined, The RIDGE__HISTORY array is updated, and the updated array is employed to binarize the current window including ridge portions therewithin and non-ridge portions therewithin.

Preferably, the ridge direction, if known, is exploited as in directional filtering.

If the ridge width is known, lower threshold values are used when binarizing a ridge, relative to higher threshold values which are used when binarizing outside the ridge.

In step 62, if the window includes an endpoint, the process proceeds to a new ridge. If the window includes a fork, the process preferably also proceeds to a new ridge because the two limbs defining the fork will be "found" separately. If the window includes neither an endpoint nor a fork (NO option of step 62), the process continues binarizing the current ridge.

It is appreciated that a topological representation of a fingerprint image may, if desired, be generated in the course of binarizing the image since topological information is available in the course of the binarization process of Fig. 4.

A preferred method for performing the topological representation generation step 44 of Fig. 1 is now described with reference to Figs. 7, 8, 25 and 26. Figs. 25 and 26, described in detail below, describe how to move along elongate configurations, such as fingerprint ridges in the present application, which are included in a binarized image. Using the method of Figs. 25 and 26, each location along each elongate configuration is encountered at least once and preferably only once. Figs. 25 and 26 also describe how to determine the connectivity structure defined by the axes of nonthinned elongate configurations, in the course of traversing those elongate configurations, including determination of the locations of endpoints and forks therewithin, and how to thin the elongate configurations.

With reference to Figs 25 & 26, a description is now provided of a preferable line following method, which is part of the publication "Line thinning by line following", O. Baruch, Pattern Recognition Letters 8 (1988) 271-276.

The line following method is performed on a binary image matrix. The background is assumed to be black. The matrix is preferably raster scanned exactly once. During the scan, the line follower is called to follow each encountered line. When the follower identifies branching of the line, it calls itself recursively to follow each of the branches. The line following is based on two pointers and a dynamic window:

LP - a pointer to follow the left edge of the line

RP - a pointer to follow the right one.

W - a rectangular window whose sides are parallel to the sides of the matrix.

The line following is performed within the pre-defined current window.

Initially the pointers are set by the scanner to the location of an encountered white pixel, which is assumed to reside on some line figure.

The line follower performs the following procedure:

First, the window W is set to surround the pointers. The window W is created so that given the locations pointed to by the pointers LP and RP, each of the window sides set at a distance d from the location which is the nearest to it. The distance of a point to a line is measured typically, by the length (in pixels) of the normal from the point to that line. The value d is set arbitrarily to 2.

Next, the edges of the line are followed, using the pointers LP and RP.

The remainder of the line following process depends on the relationship between the current window and the current segment which can be either of the following:

(a) In the "following" direction the line exits the boundary of the current window and thus both edges of the line intersect at some point with the perimeter of the window, as shown in Figs 25A &25C.

(b) End__of__line case: In the "following" direction, the line ends inside the current window so that in the following direction, none of its edges intersect with the perimeter of the window. Instead, in this case, the edges of line meet each other, as shown in Fig 25B.

If the line follower identifies an intersection of the line with the perimeter of the window, it examines whether the line branches inside the window. The intersection point on the left edge is marked as LLP and the intersection point on the right edge as RRP. The perimeter of the window is then traced between LLP and RRP. If there is no branching, all pixels on the trace will be white. Therefore if a black pixel is encountered, the follower determines a branch. In this case, when going along the perimeter from LLP to RRP the last pixel, which is white, is on the right edge of the leftmost branch. It is marked as LRP. The first white pixel after the gap of one or more contiguous black pixels is on the leftmost edge of the right branch-(es). It is marked as RLP.

The following steps are now performed repeatedly:

(a) The pointers LP and RP are set to the left and right intersection points (respectively) of the leftmost (or only) branch which has not yet been followed, and then the line following process is performed for that branch.

(b) the right branch, if any, is tested for branching. This is done until an end__of__line is encountered on all branches. Thereby, all branches of the line which evolve from the current window W, have been followed.

The window W is defined such that it surrounds the current location of the tracing pointers, thus surrounds the intersection points of the followed line with the previous window. Therefore, it is guaranteed that the window embraces the line at the location of the window. It is also guaranteed that the center of successive windows advances in the direction of the following. The process can be viewed as a rubber-ring which moves along the line and while doing so changes its form dynamically.

Figs. 26A - 26D are diagrams of a sequence of windows defined while following a line when $d=2$ and the resulting thinned output.

The method of step 44 is described herein for thinned fingerprint ridges. However, it is appreciated that the method of step 44 may equally be applied to nonthinned configurations such as nonthinned fingerprint ridges.

Reference is now made to Fig. 7 which is a simplified flowchart illustrating a preferred method for generating a topological representation of a fingerprint image.

The method of Fig. 7 generates a plurality of trees, each of which is built up from a root corresponding to a white pixel which is an endpoint in the thinned fingerprint image. A data structure which is termed herein "I__pixel" is used to represent a pixel of the image. I__pixel typically includes the following information: The X and Y coordinates of the pixel and the direction from which the pixel was arrived at, i.e. the orientation of the previously visited pixel, relative to the current pixel.

The output of Fig. 7 is an array of pointers, FINGER, including a plurality of pointers, each of which points to a corresponding one of the plurality of trees.

In step 80, I__pixel is initialized.

In step 82, the binary pixels are scanned in row and column order until I__pixel points to a white, i.e. ridge pixel which is an endpoint.

Step 86 identifies whether I__pixel is an endpoint.

In step 88 the BUILD__TREE process builds a tree having a root that corresponds to I__PIXEL. This is described in detail below with reference to Fig. 8.

Reference is now made to Fig. 8 which is a simplified flowchart of a tree building process employed in Fig. 7 which is termed herein "build__tree (I__fpixel)". The method of Fig. 8 is a recursive process which is operative to build a tree which represents the portion of a ridge which emanates from I__fpixel, i.e. which includes I__fpixel and all nodes (minutiae) which are descendants thereof.

In Fig. 8:

NEW(individual pixel) = a process for constructing a new "blank" tree data structure to store a tree whose root corresponds to the individual pixel.

FOLLOW(individual pixel, individual direction) = a process for continuing on from an individual pixel, in an individual direction such as left or right, until a endpoint or fork pixel is identified.

The prefix "I__" in the name of a record, indicates that the record contains information pertaining to a pixel of a fingerprint image. For example, records "I__fpixel", "I-lpixel" and "I__rpixel" respectively contain information pertaining to three pixels in which a father node and left and right son nodes thereof reside.

The prefix "T__" in the name of a record, indicates that the record contains information pertaining to a node of a graph representation of a fingerprint. For example, records "t__fnode" and "t__node" respectively contain information pertaining to a father node and a left son node thereof. These records include fields termed "left" and "right" in which is stored an indication of the address in memory at which information regarding the left and right sons, respectively, of the node is stored.

Postprocessing step 50 of Fig. 1 is now described in detail.

Five sample processes in which inappropriate configurations of five respective types are identified and eliminated are the following:

a. Identify and split erroneously joined ridges: Identifying pairs of adjacent forks connected by a short limb, such as forks N4 and N6 in Fig. 2A, and elimination of the short limb and the two adjacent forks.

For example, Fig. 9A is a diagrammatic illustration of a topological representation of a fingerprint, derived from the topological representation of Fig. 2B by performing the above ridge splitting process (a). Fig. 9B is a pictorial illustration which is helpful in understanding the significance of process (a).

In the course of performing ridge splitting process (a) on the topological representation of Fig. 2B, forks N4 and N6 of Fig. 2B have been identified as adjacent forks connected by a short limb. As may be seen by comparing Figs. 2A and 2B with Figs. 9B and 9A, the short limb, referenced 52 in Fig. 2A, which connects N4 and N6, has been eliminated, N4 and N6 are no longer forks, and ridge R2 has become two ridges, R2' and R2''.

b. Identify and join erroneously split ridges: Identifying pairs of adjacent endpoints located along different ridges which are oriented such that the pair of limbs corresponding to the adjacent endpoints probably is, in fact, a single limb.

For example, Fig. 10A is a diagrammatic illustration of a topological representation of a fingerprint, derived from the topological representation of Fig. 9A by performing the above ridge joining process (b). Fig. 10B is a pictorial illustration which is helpful in understanding the significance of process (b).

In the course of performing ridge joining process (b) on the topological representation of Fig. 9A, endpoints N7 and N12 of Fig. 9B have been identified as adjacent locations which are erroneously classified as endpoints. As may be seen by comparing Figs. 9A and 9B with Figs. 10A and 10B, a short limb, referenced 54 in Fig. 10B, which connects former endpoints N7 and N12, has been virtually added, N7 and N12 are no longer end-points, and ridges R3 and R2'' have become a single ridge, R3'.

A preferred criterion for identifying erroneously split ridges is as follows:

1. $|\beta - (\alpha + 180^o)|$ MOD 360 $^o < \epsilon$
2. $|\Theta - \alpha|$ MOD 180$^o < \epsilon$
3. $|\Theta - \beta|$ MOD 180$^o < \epsilon$

The various parameters are defined in Fig. 11.

c. Identify and eliminate false limbs: Identifying pairs of minutiae including a fork and an adjacent endpoint along the same ridge.

For example, Fig. 12A is a diagrammatic illustration of a topological representation of a fingerprint, derived from the topological representation of Fig. 10A by performing the above false limb elimination process (c). Fig. 12B is a pictorial illustration which is helpful in understanding the significance of process (c).

In the course of performing false limb elimination process (c) on the topological representation of Fig. 10A, fork N15 and endpoint N19 have been identified as a fork and an adjacent endpoint along the same ridge. In Fig. 12A, fork N15 and endpoint N19 have been eliminated, as illustrated by elimination of the false limb whose endpoint is N19, in Fig. 12B.

d. Identify and eliminate short ridges: Identify pairs of endpoints along the same ridge which are connected by a short arc and eliminate the short arc and the two endpoints.

e. Identify and eliminate small lakes:

As described, above, a topological representation of a fingerprint, may include one or more graphs which include a "lake", as illustrated in Fig. 3. If the topological representation is allowed to include lakes, small lakes are identified by identifying pairs of forks which are connected by two short arcs.

Small lakes and the forks which define them are eliminated.

It is appreciated that processes a - e need not be performed in the order they are presented.

Reference is now made to Fig. 13 which is a simplified flowchart of a sample postprocessing method for identifying and eliminating inappropriate configurations of the above 5 types. In Fig. 13:

$T_i$ (i = 0, 1, 2, 3) = the configuration type identified and eliminated in processes d, a, e and c respectively;

PAIR__TYPE = a process for determining whether a current pair is of configuration type $T_i$. For example, Fig. 14 is a simplified flowchart of a method for determining whether a current pair is of configuration type $T_3$.

$P_i$ (i = 0, 1, 2, 3) = the process of eliminating $T_i$, as described above with reference to processes d, a, e and c, respectively.

NEXT__PAIR = a process for moving from one node pair to another. For example, the process may move from one tree or other ridge representing structure to another, in the order defined by an array of pointers to the plurality of trees representing the plurality of nodes. Within each tree, the process may move from one node to another, using a suitable tree traversal method, and, for each node, a current pair is defined which comprises that node and its father.

A suitable tree traversal method is described in p. 195 of the above-referenced publication by Gotlieb and Gotlieb.

In the pre-order traversal method described in Gotlieb, tree traversal is recursively defined as the following order: Start from root -- traverse left subtree, using pre-order traversal method -- traverse right subtree, using pre-order traversal method.

For example, Fig. 15 is a simplified flowchart illustrating $P_3$ (process c). In Fig. 15:

$N_i$ = the i'th node in a forest in which process P3 is being carried out; and

$f_{Ni}$ = the father of $N_i$, such that fNi and Ni together comprise a false limb as described above.

Reference is now made to Fig. 16 which is a simplified block diagram illustration of topological fingerprint verification apparatus constructed and operative in accordance with a preferred embodiment of the present invention which preferably includes:

a. fingerprint image providing equipment 90, such as an optical reader 92 and a frame grabber 93:

b. a topological fingerprint processing unit 94 which receives fingerprint images for enrollment and for verification, and provides a match/no match indication for fingerprint images to be verified, relative to a previously enrolled fingerprint. The topological fingerprint processing unit 94 preferably includes:

i. a fingerprint enrollment unit 95;

ii. a fingerprint data extraction unit 96;

iii. a fingerprint data receiving unit 97 including an I/O port accepting input from a card reader 98 and/or from a keyboard 99, and

iv. a fingerprint matching unit 100.

c. Optionally, an access control unit 102 receiving the match/no match indication from the topological fingerprint processing 94 unit and controlling access to a restricted activity or area.

d. Optionally, a match/no match indicator 104 providing a visual and/or audio indication of match/no match for perception by an operator of the system and/or by an individual who has presented a fingerprint to be verified.

e. A storage medium 106 operative to store an individual enrolled fingerprint or an enrolled fingerprint bank 108 including stored representations of a multiplicity of previously enrolled fingerprint images, the stored representations including topological information regarding each enrolled fingerprint as described in detail herein.

A preferred method for using the apparatus of Fig. 16 is shown and described herein with reference to Figs. 17A - 17B.

Reference is now made to Figs. 17A and 17B which, taken together, form a simplified flowchart illustration of a fingerprint verification method provided in accordance with a preferred embodiment of the present invention which is based on creating a topological representation of fingerprints to be verified as described above with reference to the flowchart of Fig. 1.

The method of Figs. 17A - 17B preferably includes the following steps:

STEP 110: Repeat steps 112, 120, 130 and 132 for each of a plurality of individuals to be "enrolled" , such as for each of a plurality of individuals employed at a workplace.

STEP 112: Take at least one fingerprint from the individual, and preferably a plurality of fingerprints from a single finger, such as six fingerprints. Create a topological representation of each fingerprint, preferably using the topological representation creation method shown and described above with reference to Fig. 1.

STEP 120: Provide a single topological representation for the individual fingerprint.

According to one embodiment of the present invention, the single topological representation may be selected from among the plurality of topological representations created in step 112. Preferably, each topological representation created in step 112 is matched against each of the remaining ones of the plurality of topological representations created in step 112, using a suitable matching method such as the matching method described below with reference to Fig. 19. The topological representation which best matches the other topological representations, for example, the topological representation whose sum of matching scores is maximal, is selected to be the single topological representation.

For example, the output of the matching procedure may be a matching score for each pair of topological representations created in step 112. If, for example, 4 fingerprints are taken in step 112, there will be 6 pairs of topological representations, each characterized by a matching score. For each topological representation, there will be 3 matching scores characterizing the quality of match of that topological representation with the remaining three topological representations. The 3 matching scores for each topological representation may be summed, and the topological representation having the highest sum may be selected in step 120.

According to an alternative embodiment of the present invention, the single topological representation may be generated by suitably combining the plurality of topological representations, preferably such that each topological representation is taken into account to the extent that it matches well to the other topological representations.

A suitable process for combining, say, 5 topological representations comprises the following steps:

a. Initialize a match count variable defined for each arc in a first topological representation to be combined, to one.

b. Match the first topological representation with the second topological representation, preferably using the method of steps 170 and 180 in Fig. 17B.

c. Create a combined representation by merging all subgraphs that matched and adding those subgraphs that did not match. Increase the count of all matched subgraphs.

d. Match and merge the combined representation generated in step c with the third topological representation.

e. Match and merge the combined representation generated in step d with the fourth topological representation.

f. Match and merge the combined representation generated in step e with the fifth topological representation.

g. Erase from the combined representation generated in step f, those subgraphs which were found to match relatively poorly, such as those subgraphs which were matched, during the above process, less than 3 times.

A preferred method for performing step 120 is set forth in computer listing form in Appendix D.

According to a preferred embodiment of the present invention, fingerprint representations which are found to resemble the remaining fingerprints only very poorly, in comparison to a predetermined identicality threshold, are discarded. For example, an individual fingerprint representation may be compared for identicality to all remaining representations from among the plurality of representations created in step 112, and identicality scores generated by these comparison operations may be summed. If the sum of the identicality scores falls below a predetermined identicality threshold, the fingerprint representation in question is discarded.

To compare an individual fingerprint representation to the remaining fingerprints, steps 170, 180 and 184 of Fig. 17B may be employed.

STEP 130: The single fingerprint representation identifying the particular individual is stored in conjunction with other identifying information regarding the individual, such as the individual's name and/or ID number. Any suitable storage medium may be employed for this purpose, such as a hard disk, a magnetic card, a paper badge, a smart card and any suitable storage scheme.

The fingerprint representation to be stored is preferably compacted by identifying and eliminating information redundancy. For example, the length of an arc extending from a father node to a son node may be stored only in association with the son node, and not in association with the father node. The compacted information is preferably compressed, using conventional data compression techniques.

The order in which nodes are stored may, for example, be in accordance with the above-referenced teachings of Gotlieb and Gotlieb, 1978.

STEP 132: Optionally, a per-individual fingerprint similarity threshold is computed for each individual and is stored in conjunction with the fingerprint representation for the same individual. The per-individual fingerprint similarity threshold is preferably employed in step 190 in order to provide a binary criterion of

whether or not a purported fingerprint of a particular individual originates from the same finger as does the stored fingerprint of the same individual. If step 132 is omitted, a global fingerprint similarity threshold may be employed in step 190.

The per-individual fingerprint similarity threshold is typically selected in accordance with the extent to which the plurality of fingerprint representations created in step 120 match one another. For example, if there are n pairs of fingerprint representations and the n matching scores respectively corresponding thereto are $s_1$ , ..., $s_n$, the per-individual fingerprint similarity threshold may be the average of the $s_i$ scores(i = 1, ..., n).

A preferred method for computing matching scores is described below with reference to step 184 of Fig. 17B.

STEP 140: Steps 144, 150, 160, 170, 180, 184, 190 and 200 are repeated for each individual to be verified, e.g. for each individual entering a restricted zone, for each employee reporting to work, or for each customer wishing to perform a financial transaction.

STEP 144: A fingerprint is taken from the individual to be verified. Preferably, the individual to be verified is also prompted to provide another form of identification which has previously been stored, such as his name or ID number.

STEP 150: Create a topological representation of the fingerprint taken from the individual to be verified, using the method of Fig. 1. This topological representation is also termed herein an FRV (fingerprint representation to be verified).

STEP 160: Retrieve the stored topological representation of the fingerprint corresponding to the identification particulars, such as name and/or ID, received in step 144. This topological representation is also termed herein an FRS (stored fingerprint representation).

In the retrieval step, information redundancy which was eliminated in step 130 is preferably reinstated. For example, if the length of an arc extending from a father node to a son node is stored only in association with the son node, the same information is now incorporated in association with the father node.

STEP 170: The FRV and FRS are preferably aligned, one relative to the other.

Preferably, more than one alignment method is employed to align the FRV and the FRS. If the various alignment methods are found to be in substantial disagreement, an output indication is preferably provided indicating that FRV and FRS are not identical. If the various alignment methods agree, at least roughly, then a realignment is defined by selecting one of the alignment methods, or combining all of the alignment methods.

Alignment step 170 is described in detail below.

STEP 180: The FRV and FRS are compared, so as to determine portions or features of FRV which can be matched to corresponding portions or features of FRS. The output of step 180 preferably includes quantitative information such as a matching score which is high to the extent that the FRV well matches the FRS.

The matching process preferably includes a process whereby isomorphism between the FRV graph and the FRS graph, or between individual ridge-representing trees in the FRV and in the FRS, or between portions of such trees, is identified. More generally, any suitable definition of matching between graphs may serve as the basis for comparing FRV and FRS, such as the definitions provided in the following publications:

a. Harary, F., "Graph Theory", Reading MA., Addison-Wesley, 1969;

b. Berge, C. "Graphs and Hypergraphs", 2nd Revised Ed., New York, American Elsevier, 1976;

Step 180 may be based on the matching algorithms which are described in section 11.2.1 of the following publication:

Ballard, D.H. and C.M. Brown, "Computer Vision", Prentice-Hall, 1982.

A preferred method for performing step 180 is described below with reference to Fig. 19. The output of matching step 180 is termed herein the "match record" or "match data".

STEP 184: Preferably, the match record generated in step 180 is not the sole basis of the decision, made in step 190, as to whether or not FRV and FRS represent the same fingerprint. Instead, the match record is augmented by additional information regarding the FRV, the FRS, or both.

The match record and the additional information are preferably combined into a single value, also referred to herein as the "decision function" or the "value of the decision function".

Preferably, a fingerprint data analysis method is employed when constructing a system in accordance with the present invention in order to:

a. select fingerprint characteristics which are useful in determining whether or not FRV and FRS represent the same fingerprint, and

b. determine how best to combine the fingerprint characteristics into a decision function.

A preferred fingerprint data analysis method includes the following steps:

a. At least two fingerprints are provided from each of a test population including a multiplicity of individuals.

b. A plurality of fingerprint characteristics, preferably including topological characteristics, are derived from each fingerprint. The fingerprint characteristics may be derived at any step of the methods shown and described herein. For example:

i. Some characteristics may be elicited directly from the gray level or binarized fingerprint image, such as the number of ridges.

ii. An indication of fingerprint quality may be provided by evaluating the extent to which it is necessary to postprocess the fingerprint (step 50).

iii. Some characteristics may be derived from or in the course of matching step 180, such as the number of arcs which could be matched and/or the total length of the arcs which could be matched.

iv. If a plurality of alignment methods is employed in step 170, an indication of how well the outputs of the plurality of alignment methods agree between themselves, may be employed.

c. The plurality of fingerprint characteristics are statistically analyzed, for example, by using discriminant analysis, thereby to identify a subset of fingerprint characteristics which, suitably combined, are capable of well predicting fingerprint matches. This subset of characteristics is typically characterized in that the characteristics, separately or in suitable combination, are often shared by matching fingerprints, i.e. fingerprints taken from the same finger, and are not often shared by non-matching fingerprints.

Discriminant analysis is implemented in SPSS, a computerized statistical package.

The output of statistical analysis step c typically comprises a subset of fingerprint characteristics and a suitable combination process therefore, the subset and combination process together defining a suitable decision function.

The combination process may, for example, comprise a weighted sum.

STEP 190: The matching record, preferably combined with additional information regarding the FRV, the FRS or both, as described above with reference to step 184, is processed in order to generate a decision as to whether the FRV and FRS represent the same fingerprint. Preferably, the decision function computed in step 184 is compared to the per-individual fingerprint similarity threshold computed in step 132. If the decision function exceeds the per-individual fingerprint similarity threshold, the FRV and FRS are held to match. Otherwise, the FRV and FRS are held not to match.

STEP 200: A visual, audio or other output indication of the same fingerprint/different fingerprint decision generated in step 190 is preferably provided to the individual to be verified and/or to a staff person charged with verifying such individuals. Alternatively or in addition, the output of step 190 may be employed to control or actuate a suitable device such as an access controlling device, such that individuals whose FRV matches the FRS of the identifying particulars they have provided, are allowed access to a restricted facility or activity, whereas other individuals are prevented from accessing the restricted facility or activity.

Reference is now made to Fig. 18, which illustrates a preferred method for performing step 170 of Fig. 17B. First, a coarse alignment of two topological fingerprint representations is identified. Next, the coarse alignment is refined. Finally, one or the other of the two topological fingerprint representations is reoriented in accordance with the refined alignment.

It is appreciated that the refining process is applicable not only to a coarse alignment generated by the coarse alignment identification process specifically shown and described herein but also to any other suitable coarse alignment.

The alignment method preferably includes the following steps:

IDENTIFY COARSE ALIGNMENT

The method employs a dX_array having cells numbered from -MAX.SHIFT to +MAX.SHIFT, such as from -10 to +10. Each cell in the dX_array is intended to store the number of arcs found to require a particular X shift. For example, if the -MAX.SHIFT cell stores a value of 5, this will indicate that 5 arcs in one of the topological fingerprint representations were found to have a respective matching arc in the other topological fingerprint representation whose X position was displaced MAX.SHIFT pixels, relative to the position of the corresponding arc from among the 5 arcs.

The method also employs a dY_array and a dA_array which are similar to the dX_array except that they pertain to Y position and to angular orientation, respectively. STEP 210: For each arc of one of the topological fingerprint representations, termed herein FRS although this need not be the case, find all matching arcs in the other topological representation, termed herein FRV although this need not be the case. The NEXT_PAIR process may be employed to scan FRS, and FRV is preferably sorted by arc

length and scanned, such that only FRV arcs of approximately the length of the current FRS arc length are considered.

A suitable criterion for determining that an FRV arc whose vertices are ($V_1$, $V_2$) matches an FRS arc whose vertices are ($S_1$, $S_2$) may, for example, be that all of the following conditions a - d are satisfied:

a) $|L(V_1, V_2) - L(S_1, S_2)| < T_L$

b) $dX1 - T_X <= X(V_2) - X(S_2) <= dX1 + T_X$

c) $dY1 - T_Y <= Y(V_2) - Y(S_2) <= dY1 + T_Y$

d) $dA1 - T_A <= A(V_2) - A(S_2) <= dA1 + T_A$,

where:

$A(V_1)$, $A(V_2)$ = the angles, relative to the horizontal, of tangents to the ($V_1$, $V_2$) arc at $V_1$ and $V_2$, respectively;

$A(S_1)$, $A(S_2)$ = the angles, relative to the horizontal, of tangents to the ($S_1$, $S_2$) arc at $S_1$ and $S_2$, respectively;

$L(V_1,V_2)$ = the length of the ($V_1$, $V_2$) arc;

$L(S_1,S_2)$ = the length of the ($S_1$, $S_2$) arc;

$X(V_1)$, $Y(V_1)$ = the X and Y coordinates in the fingerprint image of the pixel corresponding to $V_1$;

$X(V_2)$, $Y(V_2)$ = the X and Y coordinates in the fingerprint image of the pixel corresponding to $V_2$;

$X(S_1)$, $Y(S_1)$ = the X and Y coordinates in the fingerprint image of the pixel corresponding to $S_1$;

$X(S_2)$, $Y(S_2)$ = the X and Y coordinates in the fingerprint image of the pixel corresponding to $S_2$;

$dX1 = X(V_1) - X(S_1)$;

$dY1 = Y(V_1) - Y(S_1)$;

$dA1 = A(V_1) - A(S_1)$; and

$T_L$, $T_X$, $T_Y$, $T_A$ = threshold values.

Condition (a) indicates that the arc lengths are similar. Condition (b) indicates that the X misalignment between the two putatively matching arcs is similar for both vertices. Conditions (c) and (d) indicate that the Y and angular misalignment, respectively, between the two arcs are also similar for both vertices. These conditions define a topological match which is independent of a specific location or orientation, i.e. which does not depend on whether or not the arcs are identically located or oriented.

STEP 220: For each arc ($V_1$, $V_2$) which has been matched to an arc ($S_1$, $S_2$), increment the dX__array cell whose index is dX1, by 1. Alternatively, increment the same cell by a weighted value, wherein the weighting may depend on characteristics of $S_1$ and $V_1$. For example, if these vertices are internally disposed relative to the fingerprint as a whole, more weight is given than if the vertices are externally disposed. If one or both of these vertices is a fork, more weight is given than if the vertices were both endpoints. The terms "internal" and "external" may be understood by example: Nodes 10 and 21 of Fig. 2A are internally disposed whereas node 3 is externally disposed.

STEP 240: Perform step 220 for the Y coordinate and the dY__array rather than for the X coordinate and the dX-array.

Alternatively, the dX__array and dY__array may be replaced by a single two-dimensional array which may be used to count the number of arcs which require a particular X and Y displacement, rather than separately counting arcs which require each particular X displacement and each particular Y displacement.

STEP 250: Perform step 220 for the angular orientation A and the dA__array rather than for the X coordinate and the dX__array.

In matching fingerprints, the X, Y and A shifts between matching arcs are typically distributed around particular central X, Y and A values, whereas in non-matching fingerprints the X, Y and A shifts will be distributed generally homogeneously. The dX__array, dY__array and dA__array are histograms for these shifts.

STEP 260: Find the histogram peak for each of the dX, dY and dA arrays. The index of the peak-containing dX, dY and dA cells determines respective X, Y and A displacements which together define a coarse alignment of the two fingerprint representations to be matched.

REFINE COARSE ALIGNMENT

STEP 270: From all arc pairs that were successfully matched in step 210, select a matching pair of arcs, ($V_a$, $V_b$) and ($S_a$, $S_b$) , which is close to or at each of the identified dX, dY and dA peaks and which preferably has vertices whose coordinates indicate that the two vertices are not close together.

STEP 280: Considering ($V_a$, $V_b$) ($S_a$, $S_b$) as two vectors, compute a linear transformation matrix to be applied to ($V_a$, $V_b$) so as to align it with ($S_a$, $S_b$), using conventional computation methods, such as described by Gonzalez, R. and Woods, R.E., in "Digital Image Processing", Addison-Wesley, 1992, pp. 52-55.

CORRECT RELATIVE ORIENTATION OF FINGERPRINT REPRESENTATIONS

STEP 284: Align all FRV nodes to the FRS by applying the transformation matrix calculated in step 280 to all FRV nodes.

STEP 290: Correct all FRV angles by the peak dA value.

Reference is now made to Fig. 19 which is a simplified flowchart illustrating a preferred method for performing matching step 180 of Fig. 17B, in which the stored fingerprint representation, FRS, and the fingerprint representation to be verified, FRV, are compared.

The output of Fig. 19 is an FRV/FRS match record which may, for example, include some or all of the following information and may also include more information:

a. The number of neighboring node pairs in FRS which were successfully matched to corresponding neighboring node pairs in FRV.

b. For each pair of neighboring nodes in FRS, the identity of the matching pair of neighboring nodes in FRV, if any.

c. The depth of the deepest FRS subtree for which at least one arc at each level was successfully matched to a corresponding arc in FRV.

d. The sum of the lengths of the limbs connecting the neighboring node pairs that were successfully matched.

The method of Fig. 19 preferably comprises the following steps:

STEP 310: Sort the nodes of FRV or of FRS in the order of the coordinate values of the nodes. In the forgoing discussion, it will be assumed that the coordinate values of FRV are sorted.

STEP 320: The method scans through all pairs of neighboring nodes in the fingerprint representation which was not sorted in step 310, i.e. FRS or FRV, in topological order. In the forgoing discussion, it will be assumed that the FRS is scanned. The scanning of the neighboring node pairs of the FRS graph may be in accordance with the NEXT__PAIR process described above for moving from one node pair to another. The NEXT__PAIR process moves from one tree or other ridge representing structure to another, in the order defined by an array of pointers to the plurality of trees representing the plurality of nodes. Within each tree, the process moves from one node to another, using a suitable tree traversal method, such as the method described in the above-referenced publication by Gotlieb and Gotlieb, and, for each node, a current pair is defined which comprises that node and its father.

Specifically, in step 320, the method moves to the next pair, in topological order, of neighboring FRS nodes. In the first repetition of step 320, the method moves to the first pair, in topological order, of neighboring FRS nodes. Typically the first complete pair comprises the root of the first ridge-representing tree in the tree array of FRS, and a son of that root.

STEP 330: For each pair ($S_i$, $S_{i+1}$) of neighboring nodes in FRS, search through the nodes of FRV, using the node coordinate ordering, so as to find the pair of neighboring nodes ($V_j$,$V_{j+1}$) which best matches ($S_i$, $S_{i+1}$).

Any suitable matching criterion may be employed. For example, the matching criterion may be based on some or all of the following comparison information regarding the ridge configurations of FRV and FRS:

a. The distance between $S_i$ and $V_j$;

b. The distance between $S_{i+1}$ and $V_{j+1}$;

c. The difference between the angle of the tangent at point $S_i$ to the limb connecting $S_i$ and $S_{i+1}$; and the angle of the tangent at point $V_j$ to the limb connecting $V_j$ and $V_{j+1}$.

d. The difference between the angle of the tangent at point $S_{i+1}$ to the limb connecting $S_i$ and $S_{i+1}$; and the angle of the tangent at point $V_{j+1}$ to the limb connecting $V_j$ and $V_{j+1}$.

e. The difference between the length of the limb connecting $S_i$ and $S_{i+1}$; and the length of the limb connecting $V_j$ and $V_{j+1}$.

The above information may be combined into a single "match discrepancy" value, for example, by summing. Values a, b and e may be provided in pixels, whereas values c and d may be provided in degrees. A simple sum is suitable although, alternatively, a suitable weighted sum may be used.

The best matching pair of neighboring FRV nodes is the pair of neighboring FRV nodes having the lowest "match discrepancy" value.

STEP 340: If the match discrepancy value of the best matching pair of neighboring FRV nodes is above a predetermined non-match threshold, the current pair of neighboring FRS nodes is deemed to lack a matching pair of neighboring FRV nodes and the method returns to step 320.

STEP 350: Otherwise, i.e. if the match discrepancy value of the best matching pair of neighboring FRV nodes is below the predetermined non-match threshold, the current pair of neighboring FRS nodes is deemed to match the best-matching pair of neighboring FRV nodes identified in step 330 and the FRV/FRS match record is updated.

Preferably, the method proceeds, after step 350, into a loop comprising steps 360, 370 and 380 before continuing to step 320. Alternatively, the method may return directly from step 350 to step 320.

STEP 360: In step 360, the method attempts to match a topologically adjacent FRV neighboring node pair of the just-matched FRV neighboring node pair with a correspondingly topologically adjacent FRS neighboring node pair of the just-matched FRS neighboring node pair. Step 360 typically comprises the step of computing a match discrepancy value for the new FRV and FRS node pairs.

STEP 370 determines whether the node pairs compared in step 360 are reasonably well matched. Preferably, step 370 comprises the step of comparing the match discrepancy value computed in step 360 to a threshold which may be equal to the non-match threshold of step 340 or alternatively may be somewhat greater, i.e. somewhat more lenient.

If the threshold is exceeded, the new FRV and FRS node pairs are deemed not to match and the method returns to step 320. If the threshold is not exceeded:

STEP 380: The current pair of neighboring FRS nodes is deemed to match the current pair of neighboring FRV nodes, the FRV/FRS match record is updated, and the method proceeds to step 360 in which FRS and FRV node pairs which are topologically adjacent to the just-matched FRS and FRV pairs respectively, are compared.

Where use of thresholds is described in the above specification, the thresholds may be either dynamic or predetermined.

Reference is now made to Fig. 20 which is a simplified block diagram of fingerprint processing apparatus constructed and operative in accordance with a preferred embodiment of the present invention. A particular feature of the apparatus of Fig. 20 is that the fingerprint is sampled automatically and not in response to an external stimulus such as a user's prompt.

The apparatus of Fig. 20 includes a fingerprint imager 400, such as a conventional fingerprint reader, which is operative to generate a sequence of fingerprint images by repeatedly imaging an individual's fingerprint, typically at fixed time intervals.

Optionally, a fingerprint analyzer 410 is provided which selects an individual image from among the sequence of images for processing (during verification) or storage (during enrollment), typically based on the fingerprint image development for the individual. The fingerprint analyser may analyze a variance characteristic of the fingerprint such as the variance of a cross-section of the fingerprint. Alternatively or in addition, the fingerprint analyzer may be operative to analyze at least one quality characteristic of the fingerprint other than a fingerprint variance characteristic. For example, the analyzer may analyze:

a. an indication of image brightness, such as average brightness of the image; and/or

b. an indication of image size, such as the width of the fingerprint image; and/or

c. an indication of image shape.

In selecting a fingerprint image, the fingerprint analyzer may use a priori knowledge regarding typical fingerprint image development for the individual. For example, the analyzer may store, during enrollment, and subsequently use information as to the level of fingerprint cross-sectional variance which an individual may be expected to produce.

In selecting a fingerprint image, the fingerprint analyzer's decision may alternatively or additionally be based on the actual fingerprint image development during a time period of predetermined duration. For example, the fingerprint analyzer may select the first image which has a predetermined low level of a particular quality characteristic such as cross sectional variance and may then continue to monitor other images generated during the time period, such that the first image may be superseded by a second image, having a predetermined higher level of the quality characteristic, if the higher level is achieved during the predetermined time period.

A fingerprint identifier 420 is operative to identify or verify the identity of the fingerprint image selected by the fingerprint analyser 410. It is appreciated that the fingerprint identifier 420 and the analyzer 410 may be implemented within a single processor.

Alternatively or in addition, a fingerprint archive 430 may be provided which is operative to store the fingerprint image selected by the fingerprint analyzer 410.

Optionally, a fingerprint image quality indicator 440 is provided which provides an indication to the user, such as an audio or visual indication, that a fingerprint image of sufficiently good quality has been identified. Typically, the indication is provided in response to an output from analyzer 410 indicating that a fingerprint image of sufficiently good quality has been identified. The same output is preferably provided to imager 400

which, in response, terminates the imaging process. Alternatively, the indication may be provided in response to an output from imager 400 indicating that the imaging process has been terminated. It is appreciated that, in this instance, the indication is also, indirectly, provided in response to a fingerprint image quality output generated by analyzer 410.

A particular advantage of providing the indicator 440 is that a user who expects to be provided with an indication that his fingerprint has been taken and does not receive such an indication, usually because his print image has not yet reached acceptable quality, has a natural tendency to improve his own fingerprint as by enhancing the quality of the contact of his finger with the fingerprint imaging device.

Reference is now made to Fig. 21 which is a flowchart describing a preferred method of operation for fingerprint analyzer 410 of Fig. 20. The method of Fig. 21 includes:

STEP 450: An indication is typically provided indicating that a person has approached. This indication may, for example, be provided by a system computer into which the person feeds a magnetic card. Upon receipt of this indication, the analyzer 410 is aroused from its idle state. A clock, timing the amount of time which is allocated to a person to present his finger, is initialized. A typical amount of time allocated for finger presentation is 15 seconds.

STEP 460: If the clock of step 450 has reached the allocated time limit, the process is terminated and the system may return to an idle state (STEP 470). Otherwise:

STEP 480: An image of the fingerprint is grabbed.

STEP 490: The quality of the fingerprint image is analyzed. A preferred method for analyzing fingerprint image quality is described below with reference to Fig. 22.

STEP 500: If the fingerprint is not optimal, return to step 460. If the fingerprint is optimal, proceed to step 510. A preferred method for determining whether or not a fingerprint is optimal is described below with reference to Fig. 24.

STEP 510: Return current image and fingerprint characterization.

Reference is now made to Fig. 22 which is a simplified flowchart of a preferred method for analyzing fingerprint image quality. The method includes steps 530, 540, 550, 560 and 570 which are performed for each of a plurality of cross-sections of the fingerprint image, such as for 3 cross-sections of the fingerprint image. The fingerprint image typically includes both "fingerprint" pixels and "background" pixels, both of which are typically processed unless otherwise indicated.

STEP 530: For each pixel x in the i'th cross-section of the fingerprint image, compute the distance $d_i(x)$ of each pixel value from the average gray level of a suitable window within the i'th cross-section, which may, for example, be 24 pixels long.

STEP 540: The distribution or histogram of the $d_i(x)$ values typically provides two peaks, one belonging to the background pixels and the other belonging to the fingerprint pixels. In step 540, a value $B_i$ is computed which is the approximate boundary point between the two peaks, as shown in Fig. 23A. $B_i$ may, for example, be taken to be the value which satisfies:

$$p\{ d_i(x) < B_i \} = 1/8,$$

since, typically, the area of the background peak is 1/8 of the total area of the histogram.

STEP 550: Smooth the $d_i(x)$ values, for example, by replacing each window of 24 $d_i(x)$ values with their average $S_j(x)$. The smoothed values are termed herein $S_j(x)$ values.

STEP 560: Find the left and right endpoints $L_i$ and $R_i$ of the i'th cross section of the fingerprint. For example, $L_i$ ($R_i$) may be computed by finding the point from the right (left) whose smoothed value $S_j(x)$ exceeds $B_i$, as shown in Fig. 23B.

STEP 570: Compute and store the fingerprint variance $V_i$ and the fingerprint width $W_i$, for the i'th cross section. The fingerprint variance is the average value of $d_i(x)$ values between $L_i$ and $R_i$. The fingerprint width is the difference between $L_i$ and $R_i$.

Reference is now made to Fig. 24 which is a simplified flowchart of a preferred method for performing step 500 of Fig. 21, which determines whether or not a fingerprint is optimal. The method of Fig. 24 preferably includes:

STEP 600: If no fingerprint is found to be present in the current image, the method is terminated. If a fingerprint is found in the current image and if (STEP 610) no fingerprint was found in the previous image, a pressure timer is initialized (STEP 620) which is used to put an upper bound, such as 1 second, on the amount of time the individual is allowed to try to provide an adequate fingerprint.

To determine whether a fingerprint is present, the width $W_i$ and variance $V_i$ of each cross section i may be compared to predetermined thresholds and if the predetermined thresholds are exceeded for at least one cross section, a determination may be made that a fingerprint is present.

STEP 630: The current image's fingerprint is characterized. For example, the following categories may be employed:

UNSTABLE -- If the width ($W_i$) or variance ($V_i$) of individual cross-sections change, in excess of predetermined thresholds, in successive images. Preferably, if a fingerprint is characterized as unstable, the individual is subsequently reminded not to move his finger.

LOW_VAR -- if the average variance $V_i$, over all cross-sections i, is less than a predetermined threshold.

FORWARD -- If the width of the top cross-section is relatively small, indicating that the finger may be positioned too low, relative to the lens.

For example, a suitable criterion for this category may be that the width of the top cross-section is less than 1/3 the width of the largest of the remaining cross-sections.

Preferably, if a fingerprint is characterized as "forward", the individual is subsequently reminded to move his 7@3 finger slightly forward.

BACKWARD -- If the width of|he bottom cross-section is relatively small, indicating that the finger may be positioned too high, relative to the lens.

For example, a suitable criterion for this category may be that the width of the bottom cross-section is less than 1/3 the width of the largest of the remaining cross-sections.

Preferably, if a fingerprint is characterized as "backward", the individual is subsequently reminded to place his finger horizontally.

STEP 640: If the characterization of the current image's fingerprint is deemed satisfactory or if the pressure timer of step 620 has run out, to to step 510 of Fig. 21. Otherwise, go to step 460 of Fig. 21.

It is appreciated that the fingerprint verification method of Figs. 17A and 17B has a wide variety of applications, such as but not limited to the following:

a. Workplace applications -- Ascertaining worker attendance by verifying that the fingerprint of an entering or exiting employee correspond to the ID of the entering or exiting employee.

b. Restricted entry or use applications -- Ascertaining that only authorized personnel enter a designated restricted area or perform a designated operation by verifying that the fingerprint of an entering or operating individual corresponds to the ID of the entering or operating individual;

c. Financial applications -- Ascertaining that instructions are only received from recognized individuals.

d. Testing applications -- Verifying the identity of an individual who has presented himself in order to take an examination or undergo any other type of inspection of his individual capabilities, characteristics or qualities.

e. Criminal applications -- Verifying the identity of a perpetrator of a crime who has left fingerprints at the scene of the crime.

A best mode software implementation of a fingerprint enrolling, data extraction and matching system constructed and operative in accordance with a preferred embodiment of the present invention is described in Appendices A - E, appended hereto. Specifically:

Appendix A is a hexadecimal computer listing of an executable file, entitled "enroll.dmp" and comprising a preferred software implementation of a fingerprint enrolling method provided in accordance with a first preferred embodiment of the present invention;

Appendix B is a hexadecimal computer listing of an executable file, entitled "extract.dmp" and comprising a preferred software implementation of a fingerprint data extraction method provided in accordance with a preferred embodiment of the present invention;

Appendix C is a hexadecimal computer listing of an executable file, entitled "match.dmp" and comprising a preferred software implementation of a fingerprint data matching method provided in accordance with a preferred embodiment of the present invention;

Appendix D is a hexadecimal computer listing of an executable file, entitled "b_enroll.dmp" and comprising a preferred software implementation of a fingerprint enrolling method provided in accordance with a second preferred embodiment of the present invention; and

Appendix E is a program which automatically samples a fingerprint.

The following is a description of a preferred method for using the programs of Appendix A, Appendix B, Appendix C and Appendix E.

In the forgoing description, the program of Appendix A may be replaced with the program of Appendix D, if desired.

Generally, fingerprints are sampled using Appendix E.

The data that represents a fingerprint is extracted by running Appendix B.

A bank of enrolled fingerprints is created by running Appendix A.

A match between a sample of a fingerprint and an enrolled fingerprint is found by running Appendix C.

To perform the above steps, the following procedure may be followed:

1) Create (or select) a directory to run the executable files. This will be the work directory.

2) Create two sub-directories to the work directory:

a) IMGD

b) CPSDAT

3) In order to process a fingerprint sample the fingerprint and save the sampled image in an image file in the subdirectory IMGD. To do so, the following equipment may be used:

a. A frame grabbing board inserted in a PC, such as the Cortex_I Video Frame Grabber, commercially available from Imagenation Corporation, Vancouver, Canada.

b. A fingerprint optical reader such as the DFR-90, commercially available from Identicator, Marina Del Rey, CA., USA.

4) Run Appendix E to make 5 image samples in subdirectory IMGD for each fingerprint to be enrolled.

When a prompt requesting 'finger name' is displayed, insert a name of up to 5 characters, for example: JOHN.

When prompt requesting you to 'Place your finger on the camera' is displayed, place a finger on the platen of the optical fingerprint reader and press mildly, until a 'beep' is sound, confirming that the fingerprint was sampled.

While the sampled fingerprint is being saved in a file, the following message is displayed:

Saving 'file name' ..

The file name has the 'finger name' prefix, followed by a serial number and the extension IMG, for example: JOHN1.IMG

When the prompt 'Place your finger on the camera' is displayed again, additional samples may be processed. Alternatively, stop by pressing 'ESC'.

After having 5 sampled images, for example:

JOHN1.IMG, JOHN2.IMG, JOHN3.IMG, JOHN4.IMG, JOHN5.IMG

enter 'exit to exit the sampling process.

5) Run Appendix B to generate representations for each of the samples.

A prompt requesting 'finger name' is displayed. Write a name of an image file without the serial number or the extension IMG and press ⟨enter⟩.

Example: JOHN⟨enter⟩

Output files will be created in the directory CPSDAT for all files with a prefix JOHN from subdirectory IMGD.

For Example: JOHN1.CPS, JOHN2.CPS...

6) Run Appendix A to create an enrolled representation of a fingerprint in subdirectory CPSDAT. A prompt requesting a 'finger name' is displayed. Write a 'finger name' for which data of 5 samples have been extracted as described above. Enter the name without the serial number or the extension .CPS .

For example: JOHN⟨enter⟩

The enrolled representation file JOHN.CPS will be created in CPSDAT. The prompt for a 'finger name' will appear again. The enrolling process may be repeated for other fingers. Alternatively, type 'exit' to quit.

7) To perform the matching process, use:

a. An enrolled fingerprint in CPSDAT,

# APPENDIX A

PSA Binary File Dump utility version 1.9

Copyright (C) 1984 by Phoenix Software Associates, Ltd.

Dump of ENROLL.PCK


```
   0:  4D 5A 57 01 7F 00 00 00  20 00 4A 15 FF FF 6B 20   MZW..... .J...k
  10:  80 00 00 00 12 00 42 0F  1E 00 00 00 01 00 00 00   ......B. ........
  20:  00 00 00 00 00 00 00 00  00 00 00 00 00 00 00 00   ........ ........
  30:  00 00 00 00 00 00 00 00  00 00 00 00 00 00 00 00   ........ ........
  40:  00 00 00 00 00 00 00 00  00 00 00 00 00 00 00 00   ........ ........
  50:  00 00 00 00 00 00 00 00  00 00 00 00 00 00 00 00   ........ ........
  60:  00 00 00 00 00 00 00 00  00 00 00 00 00 00 00 00   ........ ........
  70:  00 00 00 00 00 00 00 00  00 00 00 00 00 00 00 00   ........ ........
  80:  00 00 00 00 00 00 00 00  00 00 00 00 00 00 00 00   ........ ........
  90:  00 00 00 00 00 00 00 00  00 00 00 00 00 00 00 00   ........ ........
  A0:  00 00 00 00 00 00 00 00  00 00 00 00 00 00 00 00   ........ ........
  B0:  00 00 00 00 00 00 00 00  00 00 00 00 00 00 00 00   ........ ........
  C0:  00 00 00 00 00 00 00 00  00 00 00 00 00 00 00 00   ........ ........
  D0:  00 00 00 00 00 00 00 00  00 00 00 00 00 00 00 00   ........ ........
  E0:  00 00 00 00 00 00 00 00  00 00 00 00 00 00 00 00   ........ ........
  F0:  00 00 00 00 00 00 00 00  00 00 00 00 00 00 00 00   ........ ........
 100:  00 00 00 00 00 00 00 00  00 00 00 00 00 00 00 00   ........ ........
 110:  00 00 00 00 00 00 00 00  00 00 00 00 00 00 00 00   ........ ........
 120:  00 00 00 00 00 00 00 00  00 00 00 00 00 00 00 00   ........ ........
 130:  00 00 00 00 00 00 00 00  00 00 00 00 00 00 00 00   ........ ........
 140:  00 00 00 00 00 00 00 00  00 00 00 00 00 00 00 00   ........ ........
 150:  00 00 00 00 00 00 00 00  00 00 00 00 00 00 00 00   ........ ........
 160:  00 00 00 00 00 00 00 00  00 00 00 00 00 00 00 00   ........ ........
 170:  00 00 00 00 00 00 00 00  00 00 00 00 00 00 00 00   ........ ........
 180:  00 00 00 00 00 00 00 00  00 00 00 00 00 00 00 00   ........ ........
 190:  00 00 00 00 00 00 00 00  00 00 00 00 00 00 00 00   ........ ........
 1A0:  00 00 00 00 00 00 00 00  00 00 00 00 00 00 00 00   ........ ........
 1B0:  00 00 00 00 00 00 00 00  00 00 00 00 00 00 00 00   ........ ........
 1C0:  00 00 00 00 00 00 00 00  00 00 00 00 00 00 00 00   ........ ........
 1D0:  00 00 00 00 00 00 00 00  00 00 00 00 00 00 00 00   ........ ........
 1E0:  00 00 00 00 00 00 00 00  00 00 00 00 00 00 00 00   ........ ........
 1F0:  00 00 00 00 00 00 00 00  00 00 00 00 00 00 00 00   ........ ........
 200:  55 8B EC 81 EC 06 00 57  56 8E 06 DC 0A 26 C7 06   U......W V....&..
 210:  9C 01 01 00 8E 06 DE 0A  26 C7 06 94 01 01 00 B8   ........ &.......
 220:  42 00 1E 50 9A 9C 0A F2  0B 83 C4 04 B8 C2 F9 B9   B..P.... ........
 230:  AE 0E 51 50 BA 63 00 1E  52 9A E0 0A F2 0B 83 C4   ..QP.c.. R.......
 240:  08 B8 C2 F9 B9 AE 0E 51  50 9A F0 28 F2 0B 83 C4   .......Q P..(....
 250:  04 B8 66 00 1E 50 B8 C2  F9 B9 AE 0E 51 50 9A 12   ..f..P.. ....QP..
 260:  26 F2 0B 83 C4 08 3D 00  00 75 03 E9 10 01 C7 46   &.....=. .u.....F
 270:  FE 00 00 C7 46 FA 01 00  C7 46 FC 00 00 E9 08 00   ....F... .F......
 280:  83 46 FA 01 83 56 FC 00  83 7E FC 00 7E 03 E9 56   .F...V.. .~..~..V
 290:  00 7D 03 E9 09 00 83 7E  FA 05 76 03 E9 48 00 83   .}.....~ ..v..H..
 2A0:  7E FE 03 7C 03 E9 1E 00  8B 46 FA 8B 56 FC 8E 06   ~..|.... .F..V...
 2B0:  E0 0A 8B 5E FE D1 E3 D1  E3 26 89 87 8C 6C 26 89   ...^.... .&...l&.
 2C0:  97 8E 6C E9 1B 00 8B 46  FA 8B 56 FC 8E 06 E2 0A   ..l....F ..V.....
 2D0:  8B 5E FE D1 E3 D1 E3 26  89 87 8A F1 26 89 97 8C   .^.....& ....&...
 2E0:  F1 FF 46 FE E9 99 FF 83  7E FE 03 7C 03 E9 18 00   ..F..... ~..|....
 2F0:  B8 C2 F9 B9 AE 0E 51 50  B8 6B 00 1E 50 9A 9C 0A   ......QP .k..P...
 300:  F2 0B 83 C4 08 E9 41 00  8E 06 E2 0A 8B 5E FE D1   ......A. .....^..
 310:  E3 D1 E3 2B C0 26 89 87  8C F1 26 89 87 8A F1 9A   ...+.&.. ..&.....
```

```
320:  0A 00 BE 0A 3D FD FF 74  03 E9 10 00 B8 84 00 1E   ....=..t ........
330:  50 9A 9C 0A F2 0B 83 C4  04 E9 0D 00 B8 9B 00 1E   P....... ........
340:  50 9A 9C 0A F2 0B 83 C4  04 B8 A1 00 1E 50 9A 9C   P....... .....P..
350:  0A F2 0B 83 C4 04 B8 C2  F9 B9 AE 0E 51 50 BA C4   ........ ....QP..
360:  00 1E 52 9A E0 0A F2 0B  83 C4 08 B8 C2 F9 B9 AE   ..R..... ........
370:  0E 51 50 9A F0 28 F2 0B  83 C4 04 E9 D3 FE B8 00   .QP..(.. ........
380:  00 E9 00 00 5E 5F 8B E5  5D CB 55 8B EC 81 EC 00   ....^_.. ].U.....
390:  00 57 56 FF 76 08 FF 76  06 B8 C2 F9 B9 AE 0E 51   .WV.v..v .......Q
3A0:  50 B8 D1 00 1E 50 FF 76  0C FF 76 0A 9A 4C 27 F2   P....P.v ..v..L'.
3B0:  0B 83 C4 10 B8 00 00 E9  00 00 5E 5F 8B E5 5D CB   ........ ..^_..].
3C0:  55 8B EC 81 EC 00 00 57  56 FF 76 0C FF 76 0A FF   U......W V.v..v..
3D0:  76 08 FF 76 06 9A 0B 03  B8 0B 83 C4 08 E9 00 00   v..v.... ........
3E0:  5E 5F 8B E5 5D CB 55 8B  EC 81 EC 00 00 57 56 FF   ^_..].U. .....WV.
3F0:  76 1A FF 76 08 FF 76 06  B8 D7 00 1E 50 FF 76 08   v..v..v. ....P.v.
400:  FF 76 06 9A 4C 27 F2 0B  83 C4 0E FF 76 18 FF 76   .v..L'.. ....v..v
410:  16 FF 76 08 FF 76 06 9A  6A 02 B8 0B 83 C4 08 5E   ..v..v.. j......^
420:  5F 8B E5 5D CB 55 8B EC  81 EC 00 00 57 56 5E 5F   _..].U.. ....WV^_
430:  8B E5 5D CB 55 8B EC 81  EC 00 00 57 56 5E 5F 8B   ..].U... ...WV^_.
440:  E5 5D CB 55 8B EC 81 EC  00 00 57 56 5E 5F 8B E5   .].U.... ..WV^_..
450:  5D CB 55 8B EC 81 EC 0A  00 57 56 C7 46 FC 02 00   ].U..... .WV.F...
460:  C7 46 FE 1A 00 8E 06 E4  0A 26 83 3E 78 00 01 75   .F...... .&.>x..u
470:  03 E9 0C 00 B8 00 00 50  9A 06 00 99 06 83 C4 02   .......P ........
480:  8E 06 E6 0A 26 C7 06 9C  01 01 00 B8 30 88 B9 AE   ....&... ....0...
490:  0E 51 50 B8 E4 89 B9 AE  0E 51 50 9A D3 18 FB 03   .QP..... .QP.....
4A0:  83 C4 08 B8 50 00 B9 AE  0E 51 50 B8 8E 00 B9 AE   ....P... .QP.....
4B0:  0E 51 50 9A D3 18 FB 03  83 C4 08 8E 06 E8 0A 06   .QP..... ........
4C0:  BF 8C 89 BE DE 00 B9 2B  00 F3 A5 07 B8 00 00 89   .......+ ........
4D0:  46 FA 26 A3 E0 89 26 83  3E BA 89 00 74 03 E9 2D   F.&...&. >...t..-
4E0:  00 06 1E BF CA 89 BE D6  89 06 1F B9 06 00 F3 A5   ........ ........
4F0:  1F 07 C7 46 F6 CA 89 8C  46 F8 8B 46 F6 8B 56 F8   ...F.... F..F..V.
500:  1E BF BE 89 8B F0 8E DA  B9 06 00 F3 A5 1F B8 01   ........ ........
510:  00 50 9A 16 0B 87 08 83  C4 02 B8 00 00 50 9A 16   .P...... .....P..
520:  0B 87 08 83 C4 02 9A 0C  00 FB 03 8E 06 E8 0A 26   ........ .......&
530:  83 3E 9C 89 00 74 03 E9  06 00 B8 FF FF E9 98 00   .>...t.. ........
540:  9A 4F 03 25 00 9A 95 12  8F 02 9A CF 12 99 06 9A   .O.%.... ........
550:  6F 16 99 06 9A 36 17 99  06 9A 93 18 99 06 9A E4   o....6.. ........
560:  0A 99 06 89 46 FA 8E 06  EA 0A 26 83 3E 5C 01 01   ....F... ..&.>\..
570:  74 03 E9 4B 00 8E 06 E8  0A 26 83 3E E0 89 00 7C   t..K.... .&.>...|
580:  03 E9 3C 00 26 83 3E BA  89 00 74 03 E9 11 00 06   ..<.&.>. ..t.....
590:  1E BF BE 89 BE D6 89 06  1F B9 06 00 F3 A5 1F 07   ........ ........
5A0:  8E 06 E8 0A 26 83 3E BA  89 01 74 03 E9 11 00 06   ....&.>. ..t.....
5B0:  1E BF CA 89 BE D6 89 06  1F B9 06 00 F3 A5 1F 07   ........ ........
5C0:  83 7E FA 00 7F 03 E9 09  00 B8 01 00 E9 09 00 E9   .~...... ........
5D0:  06 00 B8 FF FF E9 00 00  5E 5F 8B E5 5D CB 55 8B   ........ ^_..].U.
5E0:  EC 81 EC 00 00 57 56 C7  06 4E 0C 8E 00 C7 06 50   .....WV. .N.....P
5F0:  0C AE 0E C7 06 52 0C E4  89 C7 06 54 0C AE 0E 5E   .....R.. ...T...^
600:  5F 8B E5 5D CB 55 8B EC  81 EC 04 00 57 56 B8 30   _..].U.. ....WV.0
610:  88 B9 AE 0E 51 50 BA E4  89 BB AE 0E 53 52 9A E8   ....QP.. ....SR..
620:  1B FB 03 83 C4 08 B8 50  00 B9 AE 0E 51 50 B8 8E   .......P ....QP..
630:  00 BA AE 0E 52 50 9A E8  1B FB 03 83 C4 08 8E 06   ....RP.. ........
640:  EC 0A 26 A1 48 88 8E 06  EE 0A 26 2B 06 68 00 89   ..&.H... ..&+.h..
650:  46 FE 83 7E FE 00 7F 03  E9 23 00 8B 46 FE F7 D8   F..~.... .#..F...
660:  50 B8 00 00 50 B9 30 88  BA AE 0E 52 51 B9 E4 89   P...P.0. ...RQ...
670:  BA AE 0E 52 51 50 9A 59  20 FB 03 83 C4 0E 83 7E   ...RQP.Y  ......~
```

ENROLL.DMP          Thursday, January  6, 1994  12:03pm          Page 3


```
680:  FE 00 7C 03 E9 23 00 FF  76 FE B8 00 00 50 B8 50   ..|..#.. v....P.P
690:  00 B9 AE 0E 51 50 B8 8E  00 B9 AE 0E 51 50 B8 01   ....QP.. ....QP..
6A0:  00 50 9A 59 20 FB 03 83  C4 0E 8E 06 EC 0A 26 A1   .P.Y ... ......&.
6B0:  4A 88 8E 06 EE 0A 26 2B  06 6A 00 89 46 FC 83 7E   J.....&+ .j..F..~
6C0:  FC 00 7F 03 E9 20 00 FF  76 FC B8 02 00 50 B8 50   ..... .. v....P.P
6D0:  00 06 50 B8 8E 00 B9 AE  0E 51 50 B8 01 00 50 9A   ..P..... .QP...P.
6E0:  59 20 FB 03 83 C4 0E 83  7E FC 00 7C 03 E9 26 00   Y ...... ~..|..&.
6F0:  8B 46 FC F7 D8 50 B8 02  00 50 B8 30 88 B9 AE 0E   .F...P.. .P.0....
700:  51 50 B8 E4 89 B9 AE 0E  51 50 B8 00 00 50 9A 59   QP...... QP...P.Y
710:  20 FB 03 83 C4 0E 5E 5F  8B E5 5D CB 55 8B EC 81    .....^_ ..].U...
720:  EC 02 00 57 56 C7 46 FE  00 00 E9 03 00 FF 46 FE   ...WV.F. ......F.
730:  8E 06 F0 0A 8B 46 FE 26  39 06 90 00 7F 03 E9 1E   .....F.& 9.......
740:  00 B8 1A 00 8B 5E FE 8B  CB D1 E3 03 D9 D1 E3 26   .....^.. .......&
750:  F7 AF 88 53 8B D8 26 83  A7 5C 02 F9 E9 CE FF C7   ...S..&. .\......
760:  46 FE 00 00 E9 03 00 FF  46 FE 8E 06 F2 0A 8B 46   F....... F......F
770:  FE 26 39 06 E6 89 7F 03  E9 1E 00 B8 1A 00 8B 5E   .&9..... .......^
780:  FE 8B CB D1 E3 03 D9 D1  E3 26 F7 AF DE DC 8B D8   ........ .&......
790:  26 83 A7 B2 8B F9 E9 CE  FF 5E 5F 8B E5 5D CB 55   &....... .^_..].U
7A0:  8B EC 81 EC 14 00 57 56  9A 8E 01 25 00 8E 06 F4   ......WV ...%....
7B0:  0A 26 83 3E 92 01 00 75  03 E9 1B 00 B8 30 88 B9   .&.>...u .....0..
7C0:  AE 0E 51 50 B8 E4 89 B9  AE 0E 51 50 9A 3D 17 FB   ..QP.... ..QP.=..
7D0:  03 83 C4 08 E9 18 00 B8  50 00 B9 AE 0E 51 50 B8   ........ P....QP.
7E0:  8E 00 B9 AE 0E 51 50 9A  3D 17 FB 03 83 C4 08 9A   .....QP. =.......
7F0:  B5 01 25 00 9A CC 02 25  00 C7 46 F0 00 00 E9 03   ..%....% ..F.....
800:  00 FF 46 F0 C4 1E 4E 0C  8B 46 F0 26 39 07 7F 03   ..F...N. .F.&9...
810:  E9 CE 02 C7 46 FA FF FF  8B 76 F0 D1 E6 C4 1E 4E   ....F... .v.....N
820:  0C 26 8B 40 26 89 46 F8  B8 01 00 50 8D 46 F8 16   .&.@&.F. ...P.F..
830:  50 8D 46 FA 16 50 A1 4E  0C 8B 16 50 0C 05 B6 01   P.F..P.N ...P....
840:  52 50 9A 91 24 25 00 83  C4 0E 40 74 03 E9 03 00   RP..$%.. ..@t....
850:  E9 AE FF 8E 06 F6 0A 26  83 3E 9E 01 00 75 03 E9   .......& .>...u..
860:  40 00 8E 06 E8 0A 26 83  3E BC 89 00 74 03 E9 31   @.....&. >...t..1
870:  00 B8 1A 00 F7 6E FA 8B  F0 C4 1E 4E 0C 26 F6 80   .....n.. ...N.&..
880:  CE 01 80 75 03 E9 17 00  B8 1A 00 F7 6E F8 8B F0   ...u.... ....n...
890:  C4 1E 4E 0C 26 F6 80 CE  01 80 74 03 E9 03 00 E9   ..N.&... ..t.....
8A0:  5F FF B8 FF FF 89 46 F4  89 46 F6 C7 46 EE 00 00   _.....F. .F..F...
8B0:  8D 46 F2 16 50 8D 46 F4  16 50 8D 4E F6 16 51 FF   .F..P.F. .P.N..Q.
8C0:  76 F8 FF 76 FA 9A E1 0C  25 00 83 C4 10 3D 00 00   v..v.... %....=..
8D0:  75 03 E9 DB 01 FF 76 F4  FF 76 F6 FF 76 F8 FF 76   u.....v. .v..v..v
8E0:  FA 9A F6 08 25 00 83 C4  08 FF 76 F4 FF 76 F6 A1   ....%... ..v..v..
8F0:  52 0C 8B 16 54 0C 05 26  00 52 50 A1 52 0C 8B 16   R...T..& .RP.R...
900:  54 0C 05 B6 01 52 50 FF  76 F8 FF 76 FA A1 4E 0C   T....RP. v..v..N.
910:  8B 16 50 0C 05 26 00 52  50 A1 4E 0C 8B 16 50 0C   ..P..&.R P.N...P.
920:  05 B6 01 52 50 9A 4D 24  25 00 83 C4 18 B8 1A 00   ...RP.M$ %.......
930:  F7 6E FA 8B F0 C4 1E 4E  0C 26 F6 80 CE 01 08 74   .n.....N .&.....t
940:  03 E9 5F 00 B8 1A 00 F7  6E F6 8B F0 C4 1E 52 0C   .._..... n.....R.
950:  26 F6 80 CE 01 08 75 03  E9 48 00 B8 1A 00 F7 6E   &.....u. .H.....n
960:  F6 8B F0 C4 1E 52 0C 26  8A 80 CE 01 24 06 3C 06   .....R.& ....$.<.
970:  72 03 E9 2E 00 FF 76 F4  FF 76 F6 A1 52 0C 8B 16   r.....v. .v..R...
980:  54 0C 05 B6 01 52 50 A1  52 0C 8B 16 54 0C 05 26   T....RP. R...T..&
990:  00 52 50 FF 36 54 0C FF  36 52 0C 9A 10 11 25 00   .RP.6T.. 6R....%.
9A0:  83 C4 10 B8 1A 00 F7 6E  FA 8B F0 C4 1E 4E 0C 26   .......n .....N.&
9B0:  F6 80 CE 01 08 75 03 E9  62 00 B8 1A 00 F7 6E F6   .....u.. b.....n.
9C0:  8B F0 C4 1E 52 0C 26 F6  80 CE 01 08 74 03 E9 4B   ....R.&. ....t..K
9D0:  00 B8 1A 00 F7 6E FA 8B  F0 C4 1E 4E 0C 26 8A 80   .....n.. ...N.&..
```

```
9E0:  CE 01 24 06 3C 06 72 03  E9 31 00 FF 76 F8 FF 76   ..$.<.r. .1..v..v
9F0:  FA A1 4E 0C 8B 16 50 0C  05 B6 01 52 50 A1 4E 0C   ..N...P. ...RP.N.
A00:  8B 16 50 0C 05 26 00 52  50 FF 36 50 0C FF 36 4E   ..P..&.R P.6P..6N
A10:  0C 9A 10 11 25 00 83 C4  10 FF 4E F0 C7 46 FC 00   ....%... ..N..F..
A20:  00 8D 46 F4 16 50 8D 46  F6 16 50 8D 46 F8 16 50   ..F..P.F ..P.F..P
A30:  8D 46 FA 16 50 9A 9D 06  25 00 83 C4 10 40 74 03   .F..P... %....@t.
A40:  E9 03 00 E9 5B 00 FF 76  F4 FF 76 F6 FF 76 F8 FF   ....[..v ..v..v..
A50:  76 FA 9A 82 1E 25 00 83  C4 08 3D 00 00 74 03 E9   v....%.. ..=..t..
A60:  03 00 E9 3C 00 8E 06 E8  0A 26 FF 06 AA 89 FF 46   ...<.... .&.....F
A70:  FC 26 FF 06 B2 89 8B 46  FC 26 39 06 AC 89 7C 03   .&.....F .&9...|.
A80:  E9 07 00 8B 46 FC 26 A3  AC 89 FF 76 F4 FF 76 F6   ....F.&. ...v..v.
A90:  FF 76 F8 FF 76 FA 9A F6  08 25 00 83 C4 08 E9 80   .v..v... .%......
AA0:  FF 83 7E F8 FF 74 03 E9  03 00 E9 03 00 E9 00 FE   ..~..t.. ........
AB0:  B8 01 00 50 8D 46 F8 16  50 8D 46 FA 16 50 A1 4E   ...P.F.. P.F..P.N
AC0:  0C 8B 16 50 0C 05 B6 01  52 50 9A 91 24 25 00 83   ...P.... RP..$%..
AD0:  C4 0E 40 74 03 E9 03 00  E9 03 00 E9 CD FD E9 20   ..@t.... .......
AE0:  FD B8 00 00 E9 00 00 5E  5F 8B E5 5D CB 55 8B EC   .......^ _..].U..
AF0:  81 EC 00 00 57 56 B8 1A  00 C4 5E 0A 26 F7 2F 8B   ....WV.. ..^.&./.
B00:  F0 C4 1E 4E 0C 26 F6 80  CE 01 08 75 03 E9 4E 00   ...N.&.. ...u..N.
B10:  B8 1A 00 C4 5E 12 26 F7  2F 8B F0 C4 1E 52 0C 26   ....^.&. /....R.&
B20:  F6 80 CE 01 08 74 03 E9  34 00 C4 5E 06 26 FF 37   .....t.. 4..^.&.7
B30:  C4 5E 0A 26 FF 37 A1 4E  0C 8B 16 50 0C 05 B6 01   .^.&.7.N ...P....
B40:  52 50 A1 4E 0C 8B 16 50  0C 05 26 00 52 50 FF 36   RP.N...P ..&.RP.6
B50:  50 0C FF 36 4E 0C 9A 10  11 25 00 83 C4 10 B8 1A   P..6N... .%......
B60:  00 C4 5E 0A 26 F7 2F 8B  F0 C4 1E 4E 0C 26 F6 80   ..^.&./. ...N.&..
B70:  CE 01 08 74 03 E9 6B 00  B8 1A 00 C4 5E 12 26 F7   ...t..k. ....^.&.
B80:  2F 8B F0 C4 1E 52 0C 26  F6 80 CE 01 08 75 03 E9   /....R.& .....u..
B90:  51 00 B8 1A 00 C4 5E 12  26 F7 2F 8B F0 C4 1E 52   Q.....^. &./....R
BA0:  0C 26 8A 80 CE 01 24 06  3C 06 72 03 E9 34 00 C4   .&....$. <.r..4..
BB0:  5E 0E 26 FF 37 C4 5E 12  26 FF 37 A1 52 0C 8B 16   ^.&.7.^. &.7.R...
BC0:  54 0C 05 B6 01 52 50 A1  52 0C 8B 16 54 0C 05 26   T....RP. R...T..&
BD0:  00 52 50 FF 36 54 0C FF  36 52 0C 9A 10 11 25 00   .RP.6T.. 6R....%.
BE0:  83 C4 10 B8 01 00 50 FF  76 0C FF 76 0A FF 76 08   ......P. v..v..v.
BF0:  FF 76 06 A1 4E 0C 8B 16  50 0C 05 B6 01 52 50 9A   .v..N... P....RP.
C00:  91 24 25 00 83 C4 0E 40  74 03 E9 06 00 B8 FF FF   .$%....@ t.......
C10:  E9 36 00 B8 01 00 50 FF  76 14 FF 76 12 FF 76 10   .6....P. v..v..v.
C20:  FF 76 0E A1 52 0C 8B 16  54 0C 05 B6 01 52 50 9A   .v..R... T....RP.
C30:  91 24 25 00 83 C4 0E 40  74 03 E9 06 00 B8 FF FF   .$%....@ t.......
C40:  E9 06 00 B8 00 00 E9 00  00 5E 5F 8B E5 5D CB 55   ........ .^_..].U
C50:  8B EC 81 EC 04 00 57 56  C7 46 FE 01 00 C7 46 FC   ......WV .F....F.
C60:  01 00 B8 1A 00 C4 5E 0A  26 F7 2F 8B F0 C4 1E 4E   ......^. &./....N
C70:  0C 26 83 B8 CA 01 FF 75  03 E9 1F 00 B8 1A 00 C4   .&.....u ........
C80:  5E 12 26 F7 2F 8B F0 C4  1E 52 0C 26 83 B8 CA 01   ^.&./... .R.&....
C90:  FF 74 03 E9 05 00 C7 46  FE 00 00 B8 1A 00 C4 5E   .t.....F .......^
CA0:  0A 26 F7 2F 8B F0 C4 1E  4E 0C 26 83 B8 CA 01 FF   .&./.... N.&.....
CB0:  74 03 E9 1F 00 B8 1A 00  C4 5E 12 26 F7 2F 8B F0   t....... .^.&./..
CC0:  C4 1E 52 0C 26 83 B8 CA  01 FF 75 03 E9 05 00 C7   ..R.&... ..u.....
CD0:  46 FC 00 00 FF 76 FE FF  76 0C FF 76 0A FF 76 08   F....v.. v..v..v.
CE0:  FF 76 06 A1 4E 0C 8B 16  50 0C 05 B6 01 52 50 9A   .v..N... P....RP.
CF0:  91 24 25 00 83 C4 0E 40  74 03 E9 0E 00 C4 5E 0A   .$%....@ t.....^.
D00:  26 C7 07 FF FF B8 FF FF  E9 35 00 FF 76 FC FF 76   &....... .5..v..v
D10:  14 FF 76 12 FF 76 10 FF  76 0E A1 52 0C 8B 16 54   ..v..v.. v..R...T
D20:  0C 05 B6 01 52 50 9A 91  24 25 00 83 C4 0E 40 74   ....RP.. $%....@t
D30:  03 E9 06 00 B8 FE FF E9  06 00 B8 00 00 E9 00 00   ........ ........
```

ENROLL.DMP Thursday, January 6, 1994 12:03pm Page 5

```
D40:  5E 5F 8B E5 5D CB 55 8B  EC 81 EC 08 00 57 56 B8   ^_..].U. .....WV.
D50:  1A 00 F7 6E 0A 8B F0 C4  1E 52 0C 26 8A 80 CE 01   ...n.... .R.&....
D60:  04 02 8B C8 B8 1A 00 F7  6E 0A 8B F0 C4 1E 52 0C   ........ n.....R.
D70:  26 32 88 CE 01 83 E1 06  B8 1A 00 F7 6E 0A 8B F0   &2...... ....n...
D80:  C4 1E 52 0C 26 31 88 CE  01 B8 1A 00 F7 6E 0C 8B   ..R.&1.. .....n..
D90:  F0 C4 1E 52 0C 26 8A 80  CE 01 04 02 8B C8 B8 1A   ...R.&.. ........
DA0:  00 F7 6E 0C 8B F0 C4 1E  52 0C 26 32 88 CE 01 83   ..n..... R.&2....
DB0:  E1 06 B8 1A 00 F7 6E 0C  8B F0 C4 1E 52 0C 26 31   ......n. ....R.&1
DC0:  88 CE 01 B8 1A 00 F7 6E  06 8B F0 C4 1E 4E 0C 26   .......n .....N.&
DD0:  8A 80 CE 01 04 02 8B C8  B8 1A 00 F7 6E 06 8B F0   ........ ....n...
DE0:  C4 1E 4E 0C 26 32 88 CE  01 83 E1 06 B8 1A 00 F7   ..N.&2.. ........
DF0:  6E 06 8B F0 C4 1E 4E 0C  26 31 88 CE 01 B8 1A 00   n.....N. &1......
E00:  F7 6E 08 8B F0 C4 1E 4E  0C 26 8A 80 CE 01 04 02   .n.....N .&......
E10:  8B C8 B8 1A 00 F7 6E 08  8B F0 C4 1E 4E 0C 26 32   ......n. ....N.&2
E20:  88 CE 01 83 E1 06 B8 1A  00 F7 6E 08 8B F0 C4 1E   ........ ..n.....
E30:  4E 0C 26 31 88 CE 01 B8  1A 00 F7 6E 06 8B F0 C4   N.&1.... ...n....
E40:  1E 4E 0C 26 8A 80 CE 01  24 06 3C 04 73 03 E9 09   .N.&.... $.<.s...
E50:  00 8E 06 E8 0A 26 FF 06  A4 89 B8 1A 00 F7 6E 08   .....&.. ......n.
E60:  8B F0 C4 1E 4E 0C 26 8A  80 CE 01 24 06 3C 04 73   ....N.&. ...$.<.s
E70:  03 E9 09 00 8E 06 E8 0A  26 FF 06 A4 89 8E 06 E8   ........ &.......
E80:  0A 26 FF 06 A0 89 26 FF  06 B2 89 B8 1A 00 F7 6E   .&....&. .......n
E90:  08 8B F0 C4 1E 4E 0C 26  8B 80 C4 01 89 46 FE B8   .....N.& .....F..
EA0:  1A 00 F7 6E 08 8B F0 C4  1E 4E 0C B8 1A 00 F7 6E   ...n.... .N.....n
EB0:  06 8B F8 8B C3 8C C1 C4  1E 4E 0C 8C C2 8E C1 8B   ........ .N......
EC0:  CB 8B D8 26 8B 80 B8 01  8E C2 8B D9 26 2B 81 B8   ...&.... ....&+..
ED0:  01 F7 D8 99 52 50 52 50  9A 2E 2B F2 0B 8B C8 B8   ....RPRP ..+.....
EE0:  1A 00 8B DA F7 6E 08 8B  F0 8B C3 C4 1E 4E 0C 8B   .....n.. .....N..
EF0:  D0 B8 1A 00 8B FA F7 6E  06 8B D6 8B F0 8B C3 C4   .......n ........
F00:  1E 4E 0C 26 8B 80 B6 01  8B F2 C4 1E 4E 0C 26 2B   .N.&.... ....N.&+
F10:  80 B6 01 99 52 50 52 50  8B F1 9A 2E 2B F2 0B 03   ....RPRP ....+...
F20:  F0 13 FA 57 56 9A 34 01  56 08 83 C4 04 89 46 F8   ...WV.4. V.....F.
F30:  8B 46 F8 3D 01 00 7C 03  E9 03 00 B8 01 00 99 52   .F.=..|. .......R
F40:  50 B8 E8 03 F7 6E FE 52  50 9A 94 2A F2 0B 89 46   P....n.R P..*...F
F50:  FA 81 7E FE 96 00 7F 03  E9 13 00 81 7E FA D0 07   ..~..... ....~...
F60:  7D 03 E9 09 00 8E 06 E8  0A 26 FF 06 AE 89 8E 06   }....... .&......
F70:  E8 0A 8B 46 FA 26 39 06  B0 89 7C 03 E9 07 00 8B   ...F.&9. ..|.....
F80:  46 FA 26 A3 B0 89 B8 1A  00 F7 6E 06 8B F0 C4 1E   F.&..... ..n.....
F90:  4E 0C 26 F6 80 CE 01 01  75 03 E9 4E 00 B8 1A 00   N.&..... u..N....
FA0:  F7 6E 0A 8B F0 C4 1E 52  0C 26 F6 80 CE 01 01 75   .n.....R .&.....u
FB0:  03 E9 37 00 B8 1A 00 F7  6E 06 8B F0 C4 1E 4E 0C   ..7..... n.....N.
FC0:  26 F6 80 CE 01 10 74 03  E9 17 00 B8 1A 00 F7 6E   &.....t. .......n
FD0:  0A 8B F0 C4 1E 52 0C 26  F6 80 CE 01 10 75 03 E9   .....R.& .....u..
FE0:  09 00 8E 06 E8 0A 26 FF  06 B2 89 B8 1A 00 F7 6E   ......&. .......n
FF0:  08 8B F0 C4 1E 4E 0C 26  F6 80 CE 01 01 75 03 E9   .....N.& .....u..
1000: 4E 00 B8 1A 00 F7 6E 0C  8B F0 C4 1E 52 0C 26 F6   N.....n. ....R.&.
1010: 80 CE 01 01 75 03 E9 37  00 B8 1A 00 F7 6E 08 8B   ....u..7 .....n..
1020: F0 C4 1E 4E 0C 26 F6 80  CE 01 10 74 03 E9 17 00   ...N.&.. ...t....
1030: B8 1A 00 F7 6E 0C 8B F0  C4 1E 52 0C 26 F6 80 CE   ....n... ..R.&...
1040: 01 10 75 03 E9 09 00 8E  06 E8 0A 26 FF 06 B2 89   ..u..... ...&....
1050: 81 7E FE 96 00 7F 03 E9  09 00 8E 06 E8 0A 26 FF   .~...... ......&.
1060: 06 B2 89 B8 1A 00 F7 6E  06 8B F0 C4 1E 4E 0C 26   .......n .....N.&
1070: 8A 80 CE 01 24 06 3C 04  73 03 E9 09 00 8E 06 E8   ....$.<. s.......
1080: 0A 26 FF 06 B2 89 B8 1A  00 F7 6E 08 8B F0 C4 1E   .&...... ..n.....
1090: 4E 0C 26 8A 80 CE 01 24  06 3C 04 73 03 E9 09 00   N.&....$ .<.s....
```

```
10A0:  8E 06 E8 0A 26 FF 06 B2  89 B8 1A 00 F7 6E 06 8B   ....&... .....n..
10B0:  F0 C4 1E 4E 0C 26 F6 80  CE 01 01 75 03 E9 5F 00   ...N.&.. ...u.._.
10C0:  B8 1A 00 F7 6E 08 8B F0  C4 1E 4E 0C 26 F6 80 CE   ....n... ..N.&...
10D0:  01 01 75 03 E9 48 00 B8  1A 00 F7 6E 0A 8B F0 C4   ..u..H.. ...n....
10E0:  1E 52 0C 26 F6 80 CE 01  01 75 03 E9 31 00 B8 1A   .R.&.... .u..1...
10F0:  00 F7 6E 0C 8B F0 C4 1E  52 0C 26 F6 80 CE 01 01   ..n..... R.&.....
1100:  75 03 E9 1A 00 83 7E FE  2D 7F 03 E9 11 00 8B 46   u.....~. -......F
1110:  FE 8E 06 E8 0A 26 01 06  A8 89 26 FF 06 A2 89 8B   .....&.. ..&.....
1120:  46 FE 8E 06 E8 0A 26 01  06 A6 89 5E 5F 8B E5 5D   F.....&. ...^_..]
1130:  CB 55 8B EC 81 EC 20 00  57 56 B8 1A 00 F7 6E 06   .U.... . WV....n.
1140:  8B F0 C4 1E 4E 0C 26 83  B8 BA 01 FF 75 03 E9 06   ....N.&. ....u...
1150:  00 B8 01 00 E9 03 00 B8  00 00 8B C8 B8 1A 00 F7   ........ ........
1160:  6E 06 8B F0 C4 1E 4E 0C  89 4E E2 26 83 B8 C6 01   n.....N. .N.&....
1170:  FF 75 03 E9 06 00 B8 01  00 E9 03 00 B8 00 00 8B   .u...... ........
1180:  C8 B8 1A 00 F7 6E 06 8B  F0 C4 1E 4E 0C 89 4E E0   .....n.. ...N..N.
1190:  26 83 B8 C0 01 FF 75 03  E9 06 00 B8 01 00 E9 03   &.....u. ........
11A0:  00 B8 00 00 03 46 E0 03  46 E2 8B C8 B8 1A 00 F7   .....F.. F.......
11B0:  6E 06 8B F0 C4 1E 4E 0C  26 8A 80 CE 01 25 06 00   n.....N. &....%..
11C0:  D0 E8 3B C8 74 03 E9 06  00 B8 00 00 E9 8B 03 B8   ..;.t... ........
11D0:  1A 00 F7 6E 08 8B F0 C4  1E 4E 0C 26 83 B8 BA 01   ...n.... .N.&....
11E0:  FF 75 03 E9 06 00 B8 01  00 E9 03 00 B8 00 00 8B   .u...... ........
11F0:  C8 B8 1A 00 F7 6E 08 8B  F0 C4 1E 4E 0C 89 4E E0   .....n.. ...N..N.
1200:  26 83 B8 C6 01 FF 75 03  E9 06 00 B8 01 00 E9 03   &.....u. ........
1210:  00 B8 00 00 8B C8 B8 1A  00 F7 6E 08 8B F0 C4 1E   ........ ..n.....
1220:  4E 0C 89 4E E2 26 83 B8  C0 01 FF 75 03 E9 06 00   N..N.&.. ...u....
1230:  B8 01 00 E9 03 00 B8 00  00 03 46 E2 03 46 E0 8B   ........ ..F..F..
1240:  C8 B8 1A 00 F7 6E 08 8B  F0 C4 1E 4E 0C 26 8A 80   .....n.. ...N.&..
1250:  CE 01 25 06 00 D0 E8 3B  C8 74 03 E9 06 00 B8 00   ..%....; .t......
1260:  00 E9 F6 02 B8 1A 00 F7  6E 06 8B F0 C4 1E 4E 0C   ........ n.....N.
1270:  26 8B 80 B6 01 89 46 EE  B8 1A 00 F7 6E 06 8B F0   &.....F. ....n...
1280:  C4 1E 4E 0C 26 8B 80 B8  01 89 46 F0 B8 1A 00 F7   ..N.&... ..F.....
1290:  6E 08 8B F0 C4 1E 4E 0C  26 8B 80 B6 01 89 46 E6   n.....N. &.....F.
12A0:  B8 1A 00 F7 6E 08 8B F0  C4 1E 4E 0C 26 8B 80 B8   ....n... ..N.&...
12B0:  01 89 46 E8 B8 1A 00 F7  6E 06 8B F0 C4 1E 4E 0C   ..F..... n.....N.
12C0:  8B 46 08 26 39 80 C0 01  74 03 E9 06 00 B8 01 00   .F.&9... t.......
12D0:  E9 22 00 B8 1A 00 F7 6E  06 8B F0 C4 1E 4E 0C 8B   .".....n .....N..
12E0:  46 08 26 39 80 BA 01 74  03 E9 06 00 B8 00 00 E9   F.&9...t ........
12F0:  03 00 B8 02 00 89 46 FC  B8 1A 00 F7 6E 08 8B F0   ......F. ....n...
1300:  C4 1E 4E 0C 8B 46 06 26  39 80 C0 01 74 03 E9 06   ..N..F.& 9...t...
1310:  00 B8 01 00 E9 22 00 B8  1A 00 F7 6E 08 8B F0 C4   .....".. ...n....
1320:  1E 4E 0C 8B 46 06 26 39  80 BA 01 74 03 E9 06 00   .N..F.&9 ...t....
1330:  B8 00 00 E9 03 00 B8 02  00 89 46 F8 B8 FF FF 89   ........ ..F.....
1340:  46 FE 89 46 E4 C4 5E 12  26 C7 07 B8 0B FF 76 14   F..F..^. &.....v.
1350:  FF 76 12 8D 46 EA 16 50  FF 76 F8 FF 76 E8 FF 76   .v..F..P .v..v..v
1360:  E6 FF 76 08 8D 4E F4 16  51 FF 76 FC FF 76 F0 FF   ..v..N.. Q.v..v..
1370:  76 EE FF 76 06 9A 44 15  25 00 83 C4 1C 89 46 E4   v..v..D. %.....F.
1380:  83 7E E4 04 74 03 E9 18  00 8B 46 F4 C4 5E 0A 26   .~..t... ..F..^.&
1390:  89 07 8B 46 EA C4 5E 0E  26 89 07 B8 01 00 E9 B9   ...F..^. &.......
13A0:  01 C4 5E 12 26 8B 07 89  46 EC FF 76 14 FF 76 12   ..^.&... F..v..v.
13B0:  8D 46 F6 16 50 FF 76 FC  FF 76 F0 FF 76 EE FF 76   .F..P.v. .v..v..v
13C0:  06 8D 4E F2 16 51 FF 76  F8 FF 76 E8 FF 76 E6 FF   ..N..Q.v ..v..v..
13D0:  76 08 9A 44 15 25 00 83  C4 1C 89 46 FE 83 7E FE   v..D.%.. ...F..~.
13E0:  04 74 03 E9 18 00 8B 46  F6 C4 5E 0A 26 89 07 8B   .t.....F ..^.&...
13F0:  46 F2 C4 5E 0E 26 89 07  B8 01 00 E9 5C 01 8E 06   F..^.&.. ....\...
```

ENROLL.DMP Thursday, January 6, 1994 12:03pm Page 7

```
1400:  F4 0A 26 83 3E 92 01 00  75 03 E9 06 00 B8 00 00   ..&.>... u.......
1410:  E9 47 01 83 7E E4 01 74  03 E9 38 01 83 7E FE 01   .G..~..t ..8..~..
1420:  74 03 E9 2F 01 B8 1A 00  F7 6E F6 8B F0 C4 1E 52   t../.... .n.....R
1430:  0C B8 1A 00 F7 6E EA 8B  F8 8B C3 8C C1 C4 1E 52   .....n.. .......R
1440:  0C 8C C2 8E C1 8B CB 8B  D8 26 8B 80 B8 01 8E C2   ........ .&......
1450:  8B D9 26 2B 81 B8 01 F7  D8 99 52 50 52 50 9A 2E   ..&+.... ..RPRP..
1460:  2B F2 0B 8B C8 B8 1A 00  8B DA F7 6E F6 8B F0 8B   +....... ...n....
1470:  C3 C4 1E 52 0C 8B D0 B8  1A 00 8B FA F7 6E EA 8B   ...R.... .....n..
1480:  D6 8B F0 8B C3 C4 1E 52  0C 26 8B 80 B6 01 8B F2   .......R .&......
1490:  C4 1E 52 0C 26 2B 80 B6  01 99 52 50 52 50 8B F1   ..R.&+.. ..RPRP..
14A0:  9A 2E 2B F2 0B 03 F0 13  FA 57 56 9A 34 01 56 08   ..+..... .WV.4.V.
14B0:  83 C4 04 89 46 FA 83 7E  FA 14 7C 03 E9 95 00 B8   ....F..~ ..|.....
14C0:  1A 00 F7 6E F4 8B F0 C4  1E 52 0C 26 8A 80 CE 01   ...n.... .R.&....
14D0:  04 02 8B C8 B8 1A 00 F7  6E F4 8B F0 C4 1E 52 0C   ........ n.....R.
14E0:  26 32 88 CE 01 83 E1 06  B8 1A 00 F7 6E F4 8B F0   &2...... ....n...
14F0:  C4 1E 52 0C 26 31 88 CE  01 B8 1A 00 F7 6E EA 8B   ..R.&1.. .....n..
1500:  F0 C4 1E 52 0C 26 8A 80  CE 01 04 02 8B C8 B8 1A   ...R.&.. ........
1510:  00 F7 6E EA 8B F0 C4 1E  52 0C 26 32 88 CE 01 83   ..n..... R.&2....
1520:  E1 06 B8 1A 00 F7 6E EA  8B F0 C4 1E 52 0C 26 31   ......n. ....R.&1
1530:  88 CE 01 8B 46 F6 C4 5E  0A 26 89 07 8B 46 F2 C4   ....F..^ .&...F..
1540:  5E 0E 26 89 07 8B 46 EC  C4 5E 12 26 01 07 B8 01   ^.&...F. .^.&....
1550:  00 E9 06 00 B8 00 00 E9  00 00 5E 5F 8B E5 5D CB   ........ ..^_..].
1560:  55 8B EC 81 EC 0C 00 57  56 B8 1A 00 F7 6E 12 8B   U......W V....n..
1570:  F0 C4 5E 0E 26 8B 40 10  8B C8 B8 1A 00 F7 6E 12   ..^.&.@. ......n.
1580:  8B F0 C4 5E 0E 26 39 48  04 75 03 E9 4A 00 B8 1A   ...^.&9H .u..J...
1590:  00 F7 6E 12 8B F0 C4 5E  0E 26 8B 40 0A 8B C8 B8   ..n....^ .&.@....
15A0:  1A 00 F7 6E 12 8B F0 C4  5E 0E 26 39 48 04 75 03   ...n.... ^.&9H.u.
15B0:  E9 25 00 B8 1A 00 F7 6E  12 8B F0 C4 5E 0E 26 8B   .%.....n ....^.&.
15C0:  40 10 8B C8 B8 1A 00 F7  6E 12 8B F0 C4 5E 0E 26   @....... n....^.&
15D0:  39 48 0A 74 03 E9 06 00  B8 00 00 E9 B0 03 C7 46   9H.t.... .......F
15E0:  F4 00 00 E9 03 00 FF 46  F4 83 7E F4 03 7C 03 E9   .......F ..~..|..
15F0:  29 00 B8 1A 00 F7 6E 12  8B 76 F4 8B CE D1 E6 03   ).....n. .v......
1600:  F1 D1 E6 03 F0 C4 5E 0E  26 83 78 04 FF 74 03 E9   ......^. &.x..t..
1610:  06 00 B8 00 00 E9 76 03  E9 CB FF B8 1A 00 F7 6E   ......v. .......n
1620:  12 8B F0 C4 5E 0E 26 83  60 18 F7 C7 46 FE 01 00   ....^.&. `...F...
1630:  B8 1A 00 F7 6E 12 8B F0  C4 5E 0E 8B 46 14 26 39   ....n... .^..F.&9
1640:  40 04 74 03 E9 0A 00 C7  46 FE 00 00 C7 46 F8 02   @.t..... F....F..
1650:  00 B8 1A 00 F7 6E 12 8B  F0 C4 5E 0E 8B 46 14 26   .....n.. ..^..F.&
1660:  39 40 10 74 03 E9 0A 00  C7 46 FE 02 00 C7 46 F8   9@.t.... .F....F.
1670:  00 00 83 7E FE 00 75 03  E9 09 00 83 7E FE 02 74   ...~..u. ....~..t
1680:  03 E9 D0 01 C7 46 FA 00  00 C4 5E 06 8B 46 FA 26   .....F.. ..^..F.&
1690:  39 07 7F 03 E9 17 00 8B  5E FA D1 E3 C4 76 0A 26   9....... ^....v.&
16A0:  83 38 FF 75 03 E9 06 00  FF 46 FA E9 DB FF 8B 5E   .8.u.... .F.....^
16B0:  FA D1 E3 C4 76 0A 8B 46  12 26 89 00 C4 5E 06 26   ....v..F .&...^.&
16C0:  FF 07 B8 1A 00 F7 6E 12  8B F0 C4 5E 0E 26 8B 40   ......n. ...^.&.@
16D0:  0A 89 46 F6 B8 1A 00 F7  6E F6 8B F0 C4 5E 0E 8B   ..F..... n....^..
16E0:  46 12 26 39 40 04 74 03  E9 59 00 B8 1A 00 F7 6E   F.&9@.t. .Y.....n
16F0:  12 8B 76 F8 8B CE D1 E6  03 F1 D1 E6 03 F0 C4 5E   ..v..... .......^
1700:  0E 26 8B 40 04 8B C8 B8  1A 00 F7 6E F6 8B F0 C4   .&.@.... ...n....
1710:  5E 0E 26 89 48 04 B8 1A  00 F7 6E 12 8B 76 F8 8B   ^.&.H... ..n..v..
1720:  CE D1 E6 03 F1 D1 E6 03  F0 C4 5E 0E 26 8B 40 08   ........ ..^.&.@.
1730:  8B C8 B8 1A 00 F7 6E F6  8B F0 C4 5E 0E 26 01 48   ......n. ...^.&.H
1740:  08 E9 56 00 B8 1A 00 F7  6E 12 8B 76 F8 8B CE D1   ..V..... n..v....
1750:  E6 03 F1 D1 E6 03 F0 C4  5E 0E 26 8B 40 04 8B C8   ........ ^.&.@...
```

```
1760:  B8 1A 00 F7 6E F6 8B F0  C4 5E 0E 26 89 48 10 B8   ....n... .^.&.H..
1770:  1A 00 F7 6E 12 8B 76 F8  8B CE D1 E6 03 F1 D1 E6   ...n..v. ........
1780:  03 F0 C4 5E 0E 26 8B 40  08 8B C8 B8 1A 00 F7 6E   ...^.&.@ .......n
1790:  F6 8B F0 C4 5E 0E 26 01  48 14 B8 1A 00 F7 6E 12   ....^.&. H.....n.
17A0:  8B 76 F8 8B CE D1 E6 03  F1 D1 E6 03 F0 C4 5E 0E   .v...... ......^.
17B0:  B8 1A 00 26 F7 68 04 8B  F0 C4 5E 0E 8B 46 F6 26   ...&.h.. ..^..F.&
17C0:  89 40 0A B8 1A 00 F7 6E  12 8B F0 C4 5E 0E 26 8B   .@.....n ....^.&.
17D0:  40 0E 8B C8 B8 1A 00 F7  6E 12 8B 76 F8 8B D6 D1   @....... n..v....
17E0:  E6 03 F2 D1 E6 03 F0 C4  5E 0E B8 1A 00 26 F7 68   ........ ^....&.h
17F0:  04 8B F0 C4 5E 0E 26 01  48 0E 83 7E FE 02 74 03   ....^.&. H..~..t.
1800:  E9 2C 00 B8 1A 00 F7 6E  12 03 46 0E 8B 56 10 05   .,.....n ..F..V..
1810:  10 00 8B C8 B8 1A 00 8B  DA F7 6E 12 8B F0 8B C3   ........ ..n.....
1820:  C4 5E 0E 1E 8D 78 04 8B  F1 8E D8 A5 A5 A5 1F B8   .^...x.. ........
1830:  1A 00 F7 6E 12 8B F0 C4  5E 0E 26 C7 40 10 FF FF   ...n.... ^.&.@...
1840:  B8 1A 00 F7 6E 12 8B F0  C4 5E 0E 26 C7 40 0A FF   ....n... .^.&.@..
1850:  FF E9 3A 01 B8 1A 00 F7  6E 12 8B F0 C4 5E 0E 26   ..:..... n....^.&
1860:  8B 40 10 8B C8 B8 1A 00  F7 6E 12 8B F0 C4 5E 0E   .@...... .n....^.
1870:  B8 1A 00 26 F7 68 04 8B  F0 C4 5E 0E 26 89 48 0A   ...&.h.. ..^.&.H.
1880:  B8 1A 00 F7 6E 12 8B F0  C4 5E 0E 26 8B 40 14 8B   ....n... .^.&.@..
1890:  C8 B8 1A 00 F7 6E 12 8B  F0 C4 5E 0E B8 1A 00 26   .....n.. ..^....&
18A0:  F7 68 04 8B F0 C4 5E 0E  26 01 48 0E B8 1A 00 F7   .h....^. &.H.....
18B0:  6E 12 8B F0 C4 5E 0E 26  8B 40 04 8B C8 B8 1A 00   n....^.& .@......
18C0:  F7 6E 12 8B F0 C4 5E 0E  B8 1A 00 26 F7 68 10 8B   .n....^. ...&.h..
18D0:  F0 C4 5E 0E 26 89 48 0A  B8 1A 00 F7 6E 12 8B F0   ..^.&.H. ....n...
18E0:  C4 5E 0E 26 8B 40 08 8B  C8 B8 1A 00 F7 6E 12 8B   .^.&.@.. .....n..
18F0:  F0 C4 5E 0E B8 1A 00 26  F7 68 10 8B F0 C4 5E 0E   ..^....& .h....^.
1900:  26 01 48 0E B8 F4 FF 50  B8 1A 00 F7 6E 12 8B F0   &.H....P ....n...
1910:  C4 5E 0E 26 FF 70 10 FF  76 10 FF 76 0E 9A 0D 06   .^.&.p.. v..v....
1920:  87 08 83 C4 08 89 46 FC  C7 46 FA 00 00 C4 5E 06   ......F. .F....^.
1930:  8B 46 FA 26 39 07 7F 03  E9 17 00 8B 5E FA D1 E3   .F.&9... ....^...
1940:  C4 76 0A 26 83 38 FF 75  03 E9 06 00 FF 46 FA E9   .v.&.8.u .....F..
1950:  DB FF 8B 5E FA D1 E3 C4  76 0A 8B 46 FC 26 89 00   ...^.... v..F.&..
1960:  C4 5E 06 26 FF 07 B8 1A  00 F7 6E 12 8B F0 C4 5E   .^.&.... ..n....^
1970:  0E 26 C7 40 10 FF FF B8  1A 00 F7 6E 12 8B F0 C4   .&.@.... ...n....
1980:  5E 0E 26 C7 40 04 FF FF  B8 01 00 E9 00 00 5E 5F   ^.&.@... ......^_
1990:  8B E5 5D CB 55 8B EC 81  EC 6E 00 57 56 B8 30 75   ..].U... .n.WV.0u
19A0:  89 46 EE 89 46 F6 C4 5E  1E 26 89 07 C7 46 C0 0A   .F..F..^ .&...F..
19B0:  00 B8 00 00 89 46 A8 89  46 CE 8D 46 AA 16 50 8D   .....F.. F..F..P.
19C0:  46 B6 16 50 9A BF 05 33  0A 83 C4 08 B8 1A 00 F7   F..P...3 ........
19D0:  6E 06 8B F0 C4 1E 4E 0C  26 F6 80 CE 01 08 75 03   n.....N. &.....u.
19E0:  E9 20 00 8D 46 98 16 50  B8 1A 00 F7 6E 06 03 06   . ..F..P ....n...
19F0:  4E 0C 8B 16 50 0C 05 BA  01 52 50 9A 0A 00 D6 03   N...P... .RP.....
1A00:  83 C4 08 B8 1A 00 F7 6E  12 8B F0 C4 1E 4E 0C 26   .......n .....N.&
1A10:  F6 80 CE 01 08 75 03 E9  20 00 8D 46 FA 16 50 B8   .....u..  ..F..P.
1A20:  1A 00 F7 6E 12 03 06 4E  0C 8B 16 50 0C 05 BA 01   ...n...N ...P....
1A30:  52 50 9A 0A 00 D6 03 83  C4 08 B8 1A 00 F7 6E 06   RP...... ......n.
1A40:  8B 76 0C 8B CE D1 E6 03  F1 D1 E6 03 F0 C4 1E 4E   .v...... .......N
1A50:  0C 26 8B 80 BE 01 89 46  CA C4 1E 52 0C 26 8B 47   .&.....F ...R.&.G
1A60:  02 48 50 8B 46 08 2D 14  00 50 A1 52 0C 8B 16 54   .HP.F.-. .P.R...T
1A70:  0C 05 F6 52 52 50 9A D6  01 D6 03 83 C4 08 89 46   ...RRP.. .......F
1A80:  D8 8B 46 D8 89 46 C4 E9  03 00 FF 46 C4 C4 1E 52   ..F..F.. ...F...R
1A90:  0C 8B 46 C4 26 39 47 02  7F 03 E9 1D 07 8B 76 C4   ..F.&9G. ......v.
1AA0:  8B C6 D1 E6 03 F0 D1 E6  C4 1E 52 0C 26 8B 80 F6   ........ ..R.&...
1AB0:  52 2B 46 08 89 46 EC 83  7E EC 2D 7F 03 E9 03 00   R+F..F.. ~.-.....
```

```
1AC0:  E9 F7 06 8B 76 C4 8B C6  D1 E6 03 F0 D1 E6 C4 1E   ....v... ........
1AD0:  52 0C 26 8B 80 F8 52 2B  46 0A 89 46 E0 83 7E E0   R.&...R+ F..F..~.
1AE0:  2D 7F 03 E9 03 00 E9 A1  FF 83 7E E0 D3 7C 03 E9   -....... ..~..|..
1AF0:  03 00 E9 95 FF 8B 76 C4  8B C6 D1 E6 03 F0 D1 E6   ......v. ........
1B00:  C4 1E 52 0C 26 8B 80 FA  52 89 46 C6 B8 1A 00 F7   ..R.&... R.F.....
1B10:  6E C6 8B F0 C4 1E 52 0C  26 F6 80 CE 01 08 74 03   n.....R. &.....t.
1B20:  E9 20 00 B8 1A 00 F7 6E  C6 8B F0 C4 1E 52 0C 26   . .....n .....R.&
1B30:  8A 80 CE 01 24 06 3C 02  73 03 E9 03 00 E9 4A FF   ....$.<. s.....J.
1B40:  E9 71 00 B8 1A 00 F7 6E  C6 8B F0 C4 1E 52 0C 26   .q.....n .....R.&
1B50:  8A 80 CE 01 24 06 3C 06  74 03 E9 03 00 E9 2A FF   ....$.<. t.....*.
1B60:  B8 1A 00 F7 6E 06 8B F0  C4 1E 4E 0C 26 F6 80 CE   ....n... ..N.&...
1B70:  01 08 75 03 E9 3D 00 8D  46 F0 16 50 B8 1A 00 F7   ..u..=.. F..P....
1B80:  6E C6 03 06 52 0C 8B 16  54 0C 05 BA 01 52 50 9A   n...R... T....RP.
1B90:  0A 00 D6 03 83 C4 08 8D  46 98 16 50 8D 46 F0 16   ........ F..P.F..
1BA0:  50 9A 3B 01 D6 03 83 C4  08 3D 00 00 74 03 E9 03   P.;..... .=..t...
1BB0:  00 E9 D6 FE C7 46 BC 00  00 E9 03 00 FF 46 BC 83   .....F.. .....F..
1BC0:  7E BC 03 7C 03 E9 EF 05  C7 46 D6 00 00 B8 1A 00   ~..|.... .F......
1BD0:  F7 6E C6 8B 76 BC 8B CE  D1 E6 03 F1 D1 E6 03 F0   .n..v... ........
1BE0:  C4 1E 52 0C 26 8B 80 BA  01 89 46 BE 83 7E BE FF   ..R.&... ..F..~..
1BF0:  74 03 E9 03 00 E9 C4 FF  B8 1A 00 F7 6E BE 8B F0   t....... ....n...
1C00:  C4 1E 52 0C 26 F6 80 CE  01 08 75 03 E9 17 00 B8   ..R.&... ..u.....
1C10:  1A 00 F7 6E 12 8B F0 C4  1E 4E 0C 26 F6 80 CE 01   ...n.... .N.&....
1C20:  08 75 03 E9 8A 00 B8 1A  00 F7 6E 12 8B F0 C4 1E   .u...... ..n.....
1C30:  4E 0C 26 F6 80 CE 01 08  75 03 E9 17 00 B8 1A 00   N.&..... u.......
1C40:  F7 6E BE 8B F0 C4 1E 52  0C 26 F6 80 CE 01 08 75   .n.....R .&.....u
1C50:  03 E9 5C 00 B8 1A 00 F7  6E C6 8B F0 C4 1E 52 0C   ..\..... n.....R.
1C60:  26 F6 80 CE 01 08 75 03  E9 17 00 B8 1A 00 F7 6E   &.....u. .......n
1C70:  06 8B F0 C4 1E 4E 0C 26  F6 80 CE 01 08 75 03 E9   .....N.& .....u..
1C80:  2E 00 B8 1A 00 F7 6E 06  8B F0 C4 1E 4E 0C 26 F6   ......n. ....N.&.
1C90:  80 CE 01 08 75 03 E9 1A  00 B8 1A 00 F7 6E C6 8B   ....u... .....n..
1CA0:  F0 C4 1E 52 0C 26 F6 80  CE 01 08 74 03 E9 03 00   ...R.&.. ...t....
1CB0:  FF 46 D6 B8 1A 00 F7 6E  BE 8B F0 C4 1E 52 0C 26   .F.....n .....R.&
1CC0:  F6 80 CE 01 08 74 03 E9  20 00 B8 1A 00 F7 6E BE   .....t..  .....n.
1CD0:  8B F0 C4 1E 52 0C 26 8A  80 CE 01 24 06 3C 02 74   ....R.&. ...$.<.t
1CE0:  03 E9 03 00 E9 D5 FE E9  71 00 B8 1A 00 F7 6E BE   ........ q.....n.
1CF0:  8B F0 C4 1E 52 0C 26 8A  80 CE 01 24 06 3C 06 74   ....R.&. ...$.<.t
1D00:  03 E9 03 00 E9 B5 FE B8  1A 00 F7 6E 12 8B F0 C4   ........ ...n....
1D10:  1E 4E 0C 26 F6 80 CE 01  08 75 03 E9 3D 00 8D 46   .N.&.... .u..=..F
1D20:  E6 16 50 B8 1A 00 F7 6E  BE 03 06 52 0C 8B 16 54   ..P....n ...R...T
1D30:  0C 05 BA 01 52 50 9A 0A  00 D6 03 83 C4 08 8D 46   ....RP.. .......F
1D40:  FA 16 50 8D 46 E6 16 50  9A 3B 01 D6 03 83 C4 08   ..P.F..P .;......
1D50:  3D 00 00 74 03 E9 03 00  E9 61 FE B8 1A 00 F7 6E   =..t.... .a.....n
1D60:  C6 8B F0 C4 1E 52 0C 26  8B 80 B6 01 89 46 B0 B8   .....R.& .....F..
1D70:  1A 00 F7 6E C6 8B F0 C4  1E 52 0C 26 8B 80 B8 01   ...n.... .R.&....
1D80:  89 46 B2 B8 1A 00 F7 6E  BE 8B F0 C4 1E 52 0C 26   .F.....n .....R.&
1D90:  8B 80 B6 01 89 46 A4 B8  1A 00 F7 6E BE 8B F0 C4   .....F.. ...n....
1DA0:  1E 52 0C 26 8B 80 B8 01  89 46 A6 B8 1A 00 F7 6E   .R.&.... .F.....n
1DB0:  BE 8B F0 C4 1E 52 0C 8B  46 C6 26 39 80 C0 01 74   .....R.. F.&9...t
1DC0:  03 E9 06 00 B8 01 00 E9  22 00 B8 1A 00 F7 6E BE   ........ ".....n.
1DD0:  8B F0 C4 1E 52 0C 8B 46  C6 26 39 80 BA 01 74 03   ....R..F .&9...t.
1DE0:  E9 06 00 B8 00 00 E9 03  00 B8 02 00 89 46 C8 B8   ........ .....F..
1DF0:  1A 00 F7 6E BE 8B 76 C8  8B CE D1 E6 03 F1 D1 E6   ...n..v. ........
1E00:  03 F0 C4 1E 52 0C 26 8B  80 BE 01 89 46 AE B8 1A   ....R.&. ....F...
1E10:  00 F7 6E 06 8B 76 0C 8B  CE D1 E6 03 F1 D1 E6 03   ..n..v.. ........
```

```
ENROLL.DMP          Thursday, January  6, 1994  12:03pm          Page 10

1E20:  F0 C4 1E 4E 0C 26 8B 80  BC 01 89 46 C2 B8 1A 00   ...N.&.. ...F....
1E30:  F7 6E 12 8B 76 18 8B CE  D1 E6 03 F1 D1 E6 03 F0   .n..v... ........
1E40:  C4 1E 4E 0C 26 8B 80 BC  01 89 46 BA B8 1A 00 F7   ..N.&... ..F.....
1E50:  6E C6 8B 76 BC 8B CE D1  E6 03 F1 D1 E6 03 F0 C4   n..v.... ........
1E60:  1E 52 0C 26 8B 80 BC 01  89 46 A2 B8 1A 00 F7 6E   .R.&.... .F.....n
1E70:  BE 8B 76 C8 8B CE D1 E6  03 F1 D1 E6 03 F0 C4 1E   ..v..... ........
1E80:  52 0C 26 8B 80 BC 01 89  46 9E 8B 46 A4 2B 46 14   R.&..... F..F.+F.
1E90:  89 46 E2 8B 46 A6 2B 46  16 89 46 DA C7 46 B4 01   .F..F.+F ..F..F..
1EA0:  00 FF 76 E2 9A 1E 2A F2  0B 83 C4 02 3D 2D 00 7E   ..v...*. ....=-.~
1EB0:  03 E9 13 00 FF 76 DA 9A  1E 2A F2 0B 83 C4 02 3D   .....v.. .*.....=
1EC0:  2D 00 7F 03 E9 05 00 C7  46 B4 00 00 8B 46 A2 2B   -....... F....F.+
1ED0:  46 C2 89 46 B8 81 7E B8  B4 00 7F 03 E9 09 00 8B   F..F..~. ........
1EE0:  46 B8 2D 68 01 E9 16 00  81 7E B8 4C FF 7D 03 E9   F.-h.... .~.L.}..
1EF0:  06 00 8B 46 B8 E9 06 00  8B 46 B8 05 68 01 50 9A   ...F.... .F..h.P.
1F00:  1E 2A F2 0B 83 C4 02 89  46 B8 83 7E B8 12 7F 03   .*...... F..~....
1F10:  E9 03 00 E9 A6 FC 8B 46  AE 2B 46 CA 50 9A 1E 2A   .......F .+F.P..*
1F20:  F2 0B 83 C4 02 89 46 DC  83 7E DC 2D 7F 03 E9 05   ......F. .~.-....
1F30:  00 C7 46 B4 00 00 8B 46  9E 2B 46 BA 89 46 AC 81   ..F....F .+F..F..
1F40:  7E AC B4 00 7F 03 E9 09  00 8B 46 AC 2D 68 01 E9   ~....... ..F.-h..
1F50:  16 00 81 7E AC 4C FF 7D  03 E9 06 00 8B 46 AC E9   ...~.L.} .....F..
1F60:  06 00 8B 46 AC 05 68 01  50 9A 1E 2A F2 0B 83 C4   ...F..h. P..*....
1F70:  02 89 46 AC 83 7E AC 12  7F 03 E9 05 00 C7 46 B4   ..F..~.. ......F.
1F80:  00 00 8B 46 B0 2B 46 08  99 52 50 52 50 9A 2E 2B   ...F.+F. .RPRP..+
1F90:  F2 0B 8B C8 8B 46 B2 2B  46 0A 8B DA 99 52 50 52   .....F.+ F....RPR
1FA0:  50 8B F1 8B FB 9A 2E 2B  F2 0B 03 F0 13 FA 57 56   P......+ ......WV
1FB0:  9A 34 01 56 08 83 C4 04  89 46 A0 8B 46 A4 2B 46   .4.V.... .F..F.+F
1FC0:  14 99 52 50 52 50 9A 2E  2B F2 0B 8B C8 8B 46 A6   ..RPRP.. +.....F.
1FD0:  2B 46 16 8B DA 99 52 50  52 50 8B F1 8B FB 9A 2E   +F....RP RP......
1FE0:  2B F2 0B 03 F0 13 FA 57  56 9A 34 01 56 08 83 C4   +......W V.4.V...
1FF0:  04 89 46 94 FF 76 16 FF  76 14 FF 76 0A FF 76 08   ..F..v.. v..v..v.
2000:  FF 76 A6 FF 76 A4 FF 76  B2 FF 76 B0 9A 84 01 87   .v..v..v ..v.....
2010:  08 83 C4 10 89 46 D2 B8  1A 00 F7 6E C6 8B F0 C4   .....F.. ...n....
2020:  1E 52 0C 26 F6 80 CE 01  01 75 03 E9 5E 00 B8 1A   .R.&.... .u..^...
2030:  00 F7 6E BE 8B F0 C4 1E  52 0C 26 F6 80 CE 01 01   ..n..... R.&.....
2040:  75 03 E9 47 00 B8 1A 00  F7 6E 06 8B F0 C4 1E 4E   u..G.... .n.....N
2050:  0C 26 F6 80 CE 01 01 75  03 E9 30 00 B8 1A 00 F7   .&.....u ..0.....
2060:  6E 12 8B F0 C4 1E 4E 0C  26 F6 80 CE 01 01 75 03   n.....N. &.....u.
2070:  E9 19 00 B8 14 00 F7 6E  CA B9 64 00 99 F7 F9 3B   .......n ..d....;
2080:  46 DC 7C 03 E9 05 00 C7  46 B4 00 00 FF 76 D2 9A   F.|..... F....v..
2090:  1E 2A F2 0B 83 C4 02 3D  12 00 7F 03 E9 05 00 C7   .*.....= ........
20A0:  46 B4 00 00 B8 1A 00 F7  6E 06 8B F0 C4 1E 4E 0C   F....... n.....N.
20B0:  26 F6 80 CE 01 01 75 03  E9 26 00 B8 1A 00 F7 6E   &.....u. .&.....n
20C0:  C6 8B F0 C4 1E 52 0C 26  F6 80 CE 01 01 75 03 E9   .....R.& .....u..
20D0:  0F 00 83 7E A0 14 7F 03  E9 03 00 E9 DE FA E9 0C   ...~.... ........
20E0:  00 83 7E A0 2D 7F 03 E9  03 00 E9 CF FA B8 1A 00   ..~.-... ........
20F0:  F7 6E 12 8B F0 C4 1E 4E  0C 26 F6 80 CE 01 01 75   .n.....N .&.....u
2100:  03 E9 28 00 B8 1A 00 F7  6E BE 8B F0 C4 1E 52 0C   ..(..... n.....R.
2110:  26 F6 80 CE 01 01 75 03  E9 11 00 83 7E 94 14 7F   &.....u. ....~...
2120:  03 E9 05 00 C7 46 B4 00  00 E9 0E 00 83 7E 94 2D   .....F.. .....~.-
2130:  7F 03 E9 05 00 C7 46 B4  00 00 8B 46 B8 03 46 A0   ......F. ...F..F.
2140:  89 46 E4 8B 46 AC 03 46  94 03 46 DC 89 46 DE 8B   .F..F..F ..F..F..
2150:  46 D2 03 46 DE 03 46 E4  89 46 D0 83 7E B4 00 75   F..F..F. .F..~..u
2160:  03 E9 2E 00 C4 5E 1E 8B  46 D0 26 39 07 7F 03 E9   .....^.. F.&9....
2170:  20 00 8B 46 D6 89 46 C0  8B 46 D0 C4 5E 1E 26 89    ..F..F. .F..^.&.
```

```
2180:  07 8B 46 C6 89 46 96 8B  46 BE 89 46 F8 C7 46 A8   ..F..F.. F..F..F.
2190:  01 00 8B 46 F6 39 46 E4  7C 03 E9 17 00 8B 46 E4   ...F.9F. |.....F.
21A0:  89 46 F6 8B 46 C6 89 46  D4 8B 46 BE 89 46 CC C7   .F..F..F ..F..F..
21B0:  46 CE 01 00 E9 05 FA E9  D0 F8 83 7E A8 00 75 03   F....... ...~..u.
21C0:  E9 81 00 B8 1A 00 F7 6E  96 8B F0 C4 1E 52 0C 26   .......n .....R.&
21D0:  F6 80 CE 01 01 75 03 E9  59 00 B8 1A 00 F7 6E F8   .....u.. Y.....n.
21E0:  8B F0 C4 1E 52 0C 26 F6  80 CE 01 01 75 03 E9 42   ....R.&. ....u..B
21F0:  00 B8 1A 00 F7 6E 06 8B  F0 C4 1E 4E 0C 26 F6 80   .....n.. ...N.&..
2200:  CE 01 01 75 03 E9 2B 00  B8 1A 00 F7 6E 12 8B F0   ...u..+. ....n...
2210:  C4 1E 4E 0C 26 F6 80 CE  01 01 75 03 E9 14 00 C4   ..N.&... ..u.....
2220:  5E 1E 26 83 3F 50 7F 03  E9 05 00 C7 46 A8 00 00   ^.&.?P.. ....F...
2230:  E9 11 00 C4 5E 1E 26 83  3F 73 7F 03 E9 05 00 C7   ....^.&. ?s......
2240:  46 A8 00 00 83 7E A8 00  75 03 E9 18 00 8B 46 96   F....~.. u.....F.
2250:  C4 5E 0E 26 89 07 8B 46  F8 C4 5E 1A 26 89 07 B8   .^.&...F ..^.&...
2260:  04 00 E9 67 00 83 7E CE  00 75 03 E9 58 00 B8 1A   ...g..~. .u..X...
2270:  00 F7 6E D4 8B F0 C4 1E  52 0C 26 F6 80 CE 01 01   ..n..... R.&.....
2280:  75 03 E9 41 00 B8 1A 00  F7 6E 06 8B F0 C4 1E 4E   u..A.... .n.....N
2290:  0C 26 F6 80 CE 01 01 75  03 E9 2A 00 83 7E F6 1E   .&.....u ..*..~..
22A0:  7E 03 E9 21 00 8B 46 D4  C4 5E 0E 26 89 07 8B 46   ~..!..F. .^.&...F
22B0:  CC C4 5E 1A 26 89 07 8B  46 F6 C4 5E 1E 26 89 07   ..^.&... F..^.&..
22C0:  B8 01 00 E9 06 00 B8 FF  FF E9 00 00 5E 5F 8B E5   ........ ....^_..
22D0:  5D CB 55 8B EC 81 EC 22  00 57 56 8E 06 F6 0A 26   ].U...." .WV....&
22E0:  83 3E 9E 01 00 75 03 E9  43 00 8E 06 E8 0A 26 83   .>...u.. C.....&.
22F0:  3E BC 89 00 74 03 E9 34  00 B8 1A 00 F7 6E 06 8B   >...t..4 .....n..
2300:  F0 C4 1E 4E 0C 26 F6 80  CE 01 80 75 03 E9 17 00   ...N.&.. ...u....
2310:  B8 1A 00 F7 6E 08 8B F0  C4 1E 4E 0C 26 F6 80 CE   ....n... ..N.&...
2320:  01 80 74 03 E9 06 00 B8  00 00 E9 6A 05 B8 1A 00   ..t..... ...j....
2330:  F7 6E 06 8B F0 C4 1E 4E  0C 26 83 B8 BA 01 FF 75   .n.....N .&.....u
2340:  03 E9 06 00 B8 01 00 E9  03 00 B8 00 00 8B C8 B8   ........ ........
2350:  1A 00 F7 6E 06 8B F0 C4  1E 4E 0C 89 4E E0 26 83   ...n.... .N..N.&.
2360:  B8 C6 01 FF 75 03 E9 06  00 B8 01 00 E9 03 00 B8   ....u... ........
2370:  00 00 8B C8 B8 1A 00 F7  6E 06 8B F0 C4 1E 4E 0C   ........ n.....N.
2380:  89 4E DE 26 83 B8 C0 01  FF 75 03 E9 06 00 B8 01   .N.&.... .u......
2390:  00 E9 03 00 B8 00 00 03  46 DE 03 46 E0 8B C8 B8   ........ F..F....
23A0:  1A 00 F7 6E 06 8B F0 C4  1E 4E 0C 26 8A 80 CE 01   ...n.... .N.&....
23B0:  25 06 00 D0 E8 3B C8 74  03 E9 06 00 B8 00 00 E9   %....;.t ........
23C0:  D5 04 B8 1A 00 F7 6E 08  8B F0 C4 1E 4E 0C 26 83   ......n. ....N.&.
23D0:  B8 C6 01 FF 75 03 E9 06  00 B8 01 00 E9 03 00 B8   ....u... ........
23E0:  00 00 8B C8 B8 1A 00 F7  6E 08 8B F0 C4 1E 4E 0C   ........ n.....N.
23F0:  89 4E DE 26 83 B8 BA 01  FF 75 03 E9 06 00 B8 01   .N.&.... .u......
2400:  00 E9 03 00 B8 00 00 8B  C8 B8 1A 00 F7 6E 08 8B   ........ .....n..
2410:  F0 C4 1E 4E 0C 89 4E E0  26 83 B8 C0 01 FF 75 03   ...N..N. &.....u.
2420:  E9 06 00 B8 01 00 E9 03  00 B8 00 00 03 46 E0 03   ........ .....F..
2430:  46 DE 8B C8 B8 1A 00 F7  6E 08 8B F0 C4 1E 4E 0C   F....... n.....N.
2440:  26 8A 80 CE 01 25 06 00  D0 E8 3B C8 74 03 E9 06   &....%.. ..;.t...
2450:  00 B8 00 00 E9 40 04 B8  1A 00 F7 6E 0A 8B F0 C4   .....@.. ...n....
2460:  1E 52 0C 26 83 B8 BA 01  FF 75 03 E9 06 00 B8 01   .R.&.... .u......
2470:  00 E9 03 00 B8 00 00 8B  C8 B8 1A 00 F7 6E 0A 8B   ........ .....n..
2480:  F0 C4 1E 52 0C 89 4E DE  26 83 B8 C6 01 FF 75 03   ...R..N. &.....u.
2490:  E9 06 00 B8 01 00 E9 03  00 B8 00 00 8B C8 B8 1A   ........ ........
24A0:  00 F7 6E 0A 8B F0 C4 1E  52 0C 89 4E E0 26 83 B8   ..n..... R..N.&..
24B0:  C0 01 FF 75 03 E9 06 00  B8 01 00 E9 03 00 B8 00   ...u.... ........
24C0:  00 03 46 E0 03 46 DE 8B  C8 B8 1A 00 F7 6E 0A 8B   ..F..F.. .....n..
24D0:  F0 C4 1E 52 0C 26 8A 80  CE 01 25 06 00 D0 E8 3B   ...R.&.. ..%....;
```

```
24E0:  C8 74 03 E9 06 00 B8 00  00 E9 AB 03 B8 1A 00 F7   .t...... ........
24F0:  6E 0C 8B F0 C4 1E 52 0C  26 83 B8 C6 01 FF 75 03   n.....R. &.....u.
2500:  E9 06 00 B8 01 00 E9 03  00 B8 00 00 8B C8 B8 1A   ........ ........
2510:  00 F7 6E 0C 8B F0 C4 1E  52 0C 89 4E DE 26 83 B8   ..n..... R..N.&..
2520:  BA 01 FF 75 03 E9 06 00  B8 01 00 E9 03 00 B8 00   ...u.... ........
2530:  00 8B C8 B8 1A 00 F7 6E  0C 8B F0 C4 1E 52 0C 89   .......n .....R..
2540:  4E E0 26 83 B8 C0 01 FF  75 03 E9 06 00 B8 01 00   N.&..... u.......
2550:  E9 03 00 B8 00 00 03 46  E0 03 46 DE 8B C8 B8 1A   .......F ..F.....
2560:  00 F7 6E 0C 8B F0 C4 1E  52 0C 26 8A 80 CE 01 25   ..n..... R.&....%
2570:  06 00 D0 E8 3B C8 74 03  E9 06 00 B8 00 00 E9 16   ....;.t. ........
2580:  03 B8 1A 00 F7 6E 06 8B  F0 C4 1E 4E 0C 8B 46 08   .....n.. ...N..F.
2590:  26 39 80 C0 01 74 03 E9  06 00 B8 01 00 E9 22 00   &9...t.. ......".
25A0:  B8 1A 00 F7 6E 06 8B F0  C4 1E 4E 0C 8B 46 08 26   ....n... ..N..F.&
25B0:  39 80 BA 01 74 03 E9 06  00 B8 00 00 E9 03 00 B8   9...t... ........
25C0:  02 00 89 46 FA B8 1A 00  F7 6E 0A 8B F0 C4 1E 52   ...F.... .n.....R
25D0:  0C 8B 46 0C 26 39 80 C0  01 74 03 E9 06 00 B8 01   ..F.&9.. .t......
25E0:  00 E9 22 00 B8 1A 00 F7  6E 0A 8B F0 C4 1E 52 0C   ..".....  n.....R.
25F0:  8B 46 0C 26 39 80 BA 01  74 03 E9 06 00 B8 00 00   .F.&9... t.......
2600:  E9 03 00 B8 02 00 89 46  F4 B8 1A 00 F7 6E 08 8B   .......F .....n..
2610:  F0 C4 1E 4E 0C 8B 46 06  26 39 80 C0 01 74 03 E9   ...N..F. &9...t..
2620:  06 00 B8 01 00 E9 22 00  B8 1A 00 F7 6E 08 8B F0   ......". ....n...
2630:  C4 1E 4E 0C 8B 46 06 26  39 80 BA 01 74 03 E9 06   ..N..F.& 9...t...
2640:  00 B8 00 00 E9 03 00 B8  02 00 89 46 F8 B8 1A 00   ........ ...F....
2650:  F7 6E 0C 8B F0 C4 1E 52  0C 8B 46 0A 26 39 80 C0   .n.....R ..F.&9..
2660:  01 74 03 E9 06 00 B8 01  00 E9 22 00 B8 1A 00 F7   .t...... ..".....
2670:  6E 0C 8B F0 C4 1E 52 0C  8B 46 0A 26 39 80 BA 01   n.....R. .F.&9...
2680:  74 03 E9 06 00 B8 00 00  E9 03 00 B8 02 00 89 46   t....... .......F
2690:  F0 B8 1A 00 F7 6E 08 8B  F0 C4 1E 4E 0C 26 8B 80   .....n.. ...N.&..
26A0:  B6 01 89 46 E8 B8 1A 00  F7 6E 08 8B F0 C4 1E 4E   ...F.... .n.....N
26B0:  0C 26 8B 80 B8 01 89 46  EA B8 1A 00 F7 6E 0C 8B   .&.....F .....n..
26C0:  F0 C4 1E 52 0C 26 8B 80  B6 01 89 46 E2 B8 1A 00   ...R.&.. ...F....
26D0:  F7 6E 0C 8B F0 C4 1E 52  0C 26 8B 80 B8 01 89 46   .n.....R .&.....F
26E0:  E4 B8 1A 00 F7 6E 0A 8B  F0 8B 46 F4 8B C8 D1 E0   .....n.. ..F.....
26F0:  03 C1 D1 E0 03 F0 C4 1E  52 0C 26 8B 80 BC 01 8B   ........ R.&.....
2700:  C8 B8 1A 00 F7 6E 06 8B  F0 8B 46 FA 8B D0 D1 E0   .....n.. ..F.....
2710:  03 C2 D1 E0 03 F0 C4 1E  4E 0C 26 2B 88 BC 01 89   ........ N.&+....
2720:  4E F2 81 7E F2 B4 00 7F  03 E9 09 00 8B 46 F2 2D   N..~.... .....F.-
2730:  68 01 E9 16 00 81 7E F2  4C FF 7D 03 E9 06 00 8B   h.....~. L.}.....
2740:  46 F2 E9 06 00 8B 46 F2  05 68 01 50 9A 1E 2A F2   F.....F. .h.P..*.
2750:  0B 83 C4 02 89 46 F2 B8  1A 00 F7 6E 0C 8B F0 8B   .....F.. ...n....
2760:  46 F0 8B C8 D1 E0 03 C1  D1 E0 03 F0 C4 1E 52 0C   F....... ......R.
2770:  26 8B 80 BC 01 8B C8 B8  1A 00 F7 6E 08 8B F0 C4   &....... ...n....
2780:  1E 4E 0C 26 2B 88 C2 01  89 4E EE 81 7E EE B4 00   .N.&+... .N..~...
2790:  7F 03 E9 09 00 8B 46 EE  2D 68 01 E9 16 00 81 7E   ......F. -h.....~
27A0:  EE 4C FF 7D 03 E9 06 00  8B 46 EE E9 06 00 8B 46   .L.}.... .F.....F
27B0:  EE 05 68 01 50 9A 1E 2A  F2 0B 83 C4 02 89 46 EE   ..h.P..* ......F.
27C0:  8B 46 EC 2B 46 F6 50 9A  1E 2A F2 0B 83 C4 02 89   .F.+F.P. .*......
27D0:  46 FE 8B 46 E2 2B 46 E8  99 52 50 52 50 9A 2E 2B   F..F.+F. .RPRP..+
27E0:  F2 0B 8B C8 8B 46 E4 2B  46 EA 8B DA 99 52 50 52   .....F.+ F....RPR
27F0:  50 8B F1 8B FB 9A 2E 2B  F2 0B 03 F0 13 FA 57 56   P......+ ......WV
2800:  9A 34 01 56 08 83 C4 04  89 46 E6 8B 46 E6 03 46   .4.V.... .F..F..F
2810:  EE 03 46 F2 89 46 FC B8  1A 00 F7 6E 0C 8B F0 C4   ..F..F.. ...n....
2820:  1E 52 0C 26 F6 80 CE 01  01 75 03 E9 26 00 B8 1A   .R.&.... .u..&...
2830:  00 F7 6E 08 8B F0 C4 1E  4E 0C 26 F6 80 CE 01 01   ..n..... N.&.....
```

```
2840:  75 03 E9 0F 00 83 7E FC  50 7F 03 E9 06 00 B8 00   u.....~. P.......
2850:  00 E9 43 00 B8 1A 00 F7  6E 0C 8B F0 C4 1E 52 0C   ..C..... n.....R.
2860:  26 F6 80 CE 01 01 75 03  E9 17 00 B8 1A 00 F7 6E   &.....u. .......n
2870:  08 8B F0 C4 1E 4E 0C 26  F6 80 CE 01 01 74 03 E9   .....N.& .....t..
2880:  0F 00 83 7E FC 64 7F 03  E9 06 00 B8 00 00 E9 06   ...~.d.. ........
2890:  00 B8 01 00 E9 00 00 5E  5F 8B E5 5D CB 55 8B EC   .......^ _..].U..
28A0:  81 EC 02 00 57 56 FF 76  1C FF 76 1A FF 76 18 FF   ....WV.v ..v..v..
28B0:  76 16 FF 76 14 FF 76 12  FF 76 10 FF 76 0E FF 76   v..v..v. .v..v..v
28C0:  0C FF 76 0A FF 76 08 FF  76 06 9A F7 09 87 08 83   ..v..v.. v.......
28D0:  C4 18 89 46 FE 8B 46 FE  E9 00 00 5E 5F 8B E5 5D   ...F..F. ...^_..]
28E0:  CB 55 8B EC 81 EC 00 00  57 56 C4 5E 0E 26 83 3F   .U...... WV.^.&.?
28F0:  FF 74 03 E9 06 00 B8 FF  FF E9 4A 00 C4 5E 0E 26   .t...... ..J..^.&
2900:  FF 37 FF 76 08 FF 76 06  9A 02 00 87 08 83 C4 06   .7.v..v. ........
2910:  C4 5E 0E 26 89 07 C4 5E  0E 26 83 3F FF 74 03 E9   .^.&...^ .&.?.t..
2920:  06 00 B8 FF FF E9 1E 00  B8 1A 00 C4 5E 0E 26 F7   ........ ....^.&.
2930:  2F 8B F0 C4 5E 06 26 8B  40 0A C4 5E 0A 26 89 07   /...^.&. @..^.&..
2940:  B8 00 00 E9 00 00 5E 5F  8B E5 5D CB 55 8B EC 81   ......^_ ..].U...
2950:  EC 04 00 57 56 B8 1A 00  F7 6E 06 8B 76 0A 8B CE   ...WV... .n..v...
2960:  D1 E6 03 F1 D1 E6 03 F0  C4 1E 52 0C 26 8B 80 BE   ........ ..R.&...
2970:  01 2B 46 0C 50 9A 1E 2A  F2 0B 83 C4 02 8B C8 B8   .+F.P..* ........
2980:  14 00 F7 6E 0C BB 64 00  99 F7 FB 3B C1 7C 03 E9   ...n..d. ...;.|..
2990:  06 00 B8 00 00 E9 5A 00  B9 1A 00 8B 46 06 2B 46   ......Z. ....F.+F
29A0:  08 F7 E9 D1 F8 99 52 50  52 50 9A 2E 2B F2 0B D1   ......RP RP..+...
29B0:  E0 D1 D2 52 50 9A 34 01  56 08 83 C4 04 89 46 FE   ...RP.4. V.....F.
29C0:  8B 46 FE 2B 46 0E 50 9A  1E 2A F2 0B 83 C4 02 89   .F.+F.P. .*......
29D0:  46 FC B8 14 00 F7 6E 0E  B9 64 00 99 F7 F9 3B 46   F.....n. .d....;F
29E0:  FC 7C 03 E9 06 00 B8 00  00 E9 06 00 B8 01 00 E9   .|...... ........
29F0:  00 00 5E 5F 8B E5 5D CB  55 8B EC 81 EC 14 00 57   ..^_..]. U......W
2A00:  56 C7 46 FE 32 00 8E 06  F8 0A 26 83 3E A6 01 00   V.F.2... ..&.>...
2A10:  74 03 E9 DF 00 FF 76 06  9A 9B 00 56 08 83 C4 02   t.....v. ...V....
2A20:  99 89 46 F8 89 56 FA 8B  46 FA 0B 46 F8 74 03 E9   ..F..V.. F..F.t..
2A30:  0A 00 C7 46 F8 64 00 C7  46 FA 00 00 8B 46 08 99   ...F.d.. F....F..
2A40:  89 46 EC 89 56 EE B8 10  27 BA 00 00 52 50 8D 4E   .F..V... '...RP.N
2A50:  EC 51 9A 8C 2B F2 0B 8B  46 F8 8B 56 FA 89 46 F0   .Q..+... F..V..F.
2A60:  89 56 F2 FF 76 F2 FF 76  F0 FF 76 EE FF 76 EC 9A   .V..v..v ..v..v..
2A70:  94 2A F2 0B 89 46 F4 89  56 F6 8B 46 F4 3B 46 FE   .*...F.. V..F.;F.
2A80:  7F 03 E9 03 00 8B 46 FE  89 46 FC 8B 46 FE F7 D8   ......F. .F..F...
2A90:  3B 46 FC 7C 03 E9 03 00  8B 46 FC 89 46 FC 8B 46   ;F.|.... .F..F..F
2AA0:  FC C4 5E 0E 26 29 07 8B  46 08 C4 5E 0A 26 01 07   ..^.&).. F..^.&..
2AB0:  8B 46 FC 99 89 46 EC 89  56 EE FF 76 06 9A 02 00   .F...F.. V..v....
2AC0:  56 08 83 C4 02 99 52 50  8D 46 EC 50 9A 8C 2B F2   V.....RP .F.P..+.
2AD0:  0B B8 10 27 BA 00 00 52  50 FF 76 EE FF 76 EC 9A   ...'...R P.v..v..
2AE0:  94 2A F2 0B 89 46 F4 89  56 F6 8B 46 F4 C4 5E 0A   .*...F.. V..F..^.
2AF0:  26 29 47 02 5E 5F 8B E5  5D CB 55 8B EC 81 EC 08   &)G.^_.. ].U.....
2B00:  00 57 56 C4 5E 06 26 83  7F 0E 01 1B C0 40 89 46   .WV.^.&. .....@.F
2B10:  F8 C7 46 FE 00 00 C7 46  FA 00 00 E9 03 00 FF 46   ..F....F .......F
2B20:  FA C4 5E 06 8B 46 FA 26  39 07 7F 03 E9 A4 00 81   ..^..F.& 9.......
2B30:  7E FE C8 00 7C 03 E9 9A  00 8B 76 FA D1 E6 C4 5E   ~...|... ..v....^
2B40:  06 26 8B 40 26 89 46 FC  83 7E FC FF 74 03 E9 03   .&.@&.F. .~..t...
2B50:  00 E9 CA FF 83 7E FC FF  75 03 E9 73 00 B8 1A 00   .....~.. u..s....
2B60:  F7 6E FC 8B F0 C4 5E 06  26 F6 80 CE 01 08 75 03   .n....^. &.....u.
2B70:  E9 41 00 8E 06 FA 0A 26  83 3E 9E 01 00 75 03 E9   .A.....& .>...u..
2B80:  1F 00 83 7E F8 00 75 03  E9 16 00 B8 1A 00 F7 6E   ...~..u. .......n
2B90:  FC 8B F0 C4 5E 06 26 F6  80 CE 01 80 75 03 E9 13   ....^.&. ....u...
```

```
2BA0:  00 8B 5E FE D1 E3 D1 E3  C4 76 0A 8B 46 FC 26 89   ..^..... .v..F.&.
2BB0:  00 FF 46 FE FF 76 FC 8B  46 06 8B 56 08 05 B6 01   ..F..v.. F..V....
2BC0:  52 50 9A 02 00 87 08 83  C4 06 89 46 FC E9 84 FF   RP...... ...F....
2BD0:  E9 4B FF 8B 46 FE C4 5E  0E 26 89 07 5E 5F 8B E5   .K..F..^ .&..^_..
2BE0:  5D CB 55 8B EC 81 EC 00  00 57 56 B8 2A 00 B9 AE   ].U..... .WV.*...
2BF0:  0E 51 50 B8 68 69 B9 AE  0E 51 50 B8 8E 00 B9 AE   .QP.hi.. .QP.....
2C00:  0E 51 50 9A 0A 00 8F 02  83 C4 0C B8 14 00 B9 AE   .QP..... ........
2C10:  0E 51 50 B8 46 66 B9 AE  0E 51 50 B8 E4 89 B9 AE   .QP.Ff.. .QP.....
2C20:  0E 51 50 9A 0A 00 8F 02  83 C4 0C B8 A6 F9 B9 AE   .QP..... ........
2C30:  0E 51 50 9A 74 01 8F 02  83 C4 04 FF 76 14 FF 76   .QP.t... ....v..v
2C40:  12 FF 76 10 FF 76 0E FF  76 0C FF 76 0A FF 76 08   ..v..v.. v..v..v.
2C50:  FF 76 06 9A 8C 02 8F 02  83 C4 10 E9 00 00 5E 5F   .v...... ......^_
2C60:  8B E5 5D CB 55 8B EC 81  EC 12 00 57 56 C7 46 FE   ..].U... ...WV.F.
2C70:  00 00 C7 46 FA 00 00 E9  03 00 FF 46 FA 8E 06 FC   ...F.... ...F....
2C80:  0A 8B 46 FA 26 39 06 2A  00 7F 03 E9 DF 00 83 7E   ..F.&9.* .......~
2C90:  FE 32 7C 03 E9 D6 00 8D  46 EE 16 50 B8 1A 00 8E   .2|..... F..P....
2CA0:  06 FE 0A 8B 5E FA D1 E3  D1 E3 26 F7 AF 68 69 05   ....^... ..&..hi.
2CB0:  48 02 B9 AE 0E 51 50 9A  0A 00 D6 03 83 C4 08 C7   H....QP. ........
2CC0:  46 FC 00 00 E9 03 00 FF  46 FC 8E 06 00 0B 8B 46   F....... F......F
2CD0:  FC 26 39 06 14 00 7F 03  E9 8F 00 83 7E FE 32 7C   .&9..... ....~.2|
2CE0:  03 E9 86 00 8D 46 F4 16  50 B8 1A 00 8E 06 02 0B   .....F.. P.......
2CF0:  8B 5E FC D1 E3 D1 E3 26  F7 AF 46 66 05 9E 8B B9   .^.....& ..Ff....
2D00:  AE 0E 51 50 9A 0A 00 D6  03 83 C4 08 8D 46 F4 16   ..QP.... .....F..
2D10:  50 8D 46 EE 16 50 9A 3B  01 D6 03 83 C4 08 3D 00   P.F..P.; ......=.
2D20:  00 75 03 E9 41 00 8E 06  FE 0A 8B 5E FA D1 E3 D1   .u..A... ...^....
2D30:  E3 26 8B 87 68 69 8E 06  04 0B B1 03 8B 5E FE D3   .&..hi.. .....^..
2D40:  E3 26 89 87 98 6C 8E 06  02 0B 8B 5E FC D1 E3 D1   .&...l.. ...^....
2D50:  E3 26 8B 87 46 66 8B 5E  FE D3 E3 8E 06 04 0B 26   .&..Ff.^ .......&
2D60:  89 87 9A 6C FF 46 FE E9  5D FF E9 0D FF 8B 46 FE   ...l.F.. ].....F.
2D70:  C4 5E 06 26 89 07 5E 5F  8B E5 5D CB 55 8B EC 81   .^.&..^_ ..].U...
2D80:  EC 2A 00 57 56 B8 00 00  89 46 DE 89 46 E0 C7 46   .*.WV... .F..F..F
2D90:  E2 00 00 E9 03 00 FF 46  E2 8E 06 06 0B 8B 46 E2   .......F ......F.
2DA0:  26 39 06 A6 F9 7F 03 E9  15 00 8E 06 04 0B B1 03   &9...... ........
2DB0:  8B 5E E2 D3 E3 26 C7 87  9E 6C 00 00 E9 D7 FF C7   .^...&.. .l......
2DC0:  46 E4 00 00 E9 03 00 FF  46 E4 8E 06 06 0B 8B 46   F....... F......F
2DD0:  E4 26 39 06 A6 F9 7F 03  E9 C8 04 8E 06 04 0B B1   .&9..... ........
2DE0:  03 8B 5E E4 D3 E3 26 8B  87 98 6C 89 46 F6 8B 5E   ..^...&. ..l.F..^
2DF0:  E4 D3 E3 26 8B 87 9A 6C  89 46 FE C7 46 E2 00 00   ...&...l .F..F...
2E00:  E9 03 00 FF 46 E2 8E 06  06 0B 8B 46 E2 26 39 06   ....F... ...F.&9.
2E10:  A6 F9 7F 03 E9 15 00 8E  06 04 0B B1 03 8B 5E E2   ........ ......^.
2E20:  D3 E3 26 C7 87 9C 6C 00  00 E9 D7 FF B8 00 00 89   ..&...l. ........
2E30:  46 E6 89 46 F2 C7 46 E8  64 00 C7 46 F0 01 00 C7   F..F..F. d..F....
2E40:  46 D6 FF FF C7 46 E2 00  00 E9 03 00 FF 46 E2 8E   F....F.. .....F..
2E50:  06 06 0B 8B 46 E2 26 39  06 A6 F9 7F 03 E9 7F 03   ....F.&9 ........
2E60:  8B 46 E4 39 46 E2 75 03  E9 48 00 8E 06 04 0B B1   .F.9F.u. .H......
2E70:  03 8B 5E E2 D3 E3 26 83  BF 9C 6C FF 75 03 E9 32   ..^...&. ..l.u..2
2E80:  00 8B 5E E4 D3 E3 26 8B  87 98 6C 8B 5E E2 D3 E3   ..^...&. ..l.^...
2E90:  26 39 87 98 6C 75 03 E9  19 00 8B 5E E4 D3 E3 26   &9..lu.. ...^...&
2EA0:  8B 87 9A 6C 8B 5E E2 D3  E3 26 39 87 9A 6C 74 03   ...l.^.. .&9..lt.
2EB0:  E9 03 00 E9 96 FF 8E 06  04 0B B1 03 8B 5E E2 D3   ........ .....^..
2EC0:  E3 26 8B 87 98 6C 89 46  EE 8B 5E E2 D3 E3 26 8B   .&...l.F ..^...&.
2ED0:  87 9A 6C 89 46 FC B8 1A  00 F7 6E FC 8B D8 8E 06   ..l.F... ..n.....
2EE0:  08 0B 26 8B 87 9A 8B 8B  D0 B8 1A 00 8B DA F7 6E   ..&..... .......n
2EF0:  FE 8B F0 26 2B 9C 9A 8B  B8 1A 00 F7 6E EE 8B F0   ...&+... ....n...
```

```
ENROLL.DMP            Thursday, January  6, 1994  12:03pm              Page 15

2F00:  8E 06 0A 0B 26 2B 9C 44  02 B8 1A 00 F7 6E F6 8B   ....&+.D .....n..
2F10:  F0 26 03 9C 44 02 53 9A  1E 2A F2 0B 83 C4 02 89   .&..D.S. .*......
2F20:  46 FA B8 1A 00 F7 6E FC  8B D8 8E 06 08 0B 26 8B   F.....n. ......&.
2F30:  87 9C 8B 8B C8 B8 1A 00  F7 6E FE 8B D8 26 2B 8F   ........ .n...&+.
2F40:  9C 8B B8 1A 00 F7 6E EE  8B D8 8E 06 0A 0B 26 2B   ......n. ......&+
2F50:  8F 46 02 B8 1A 00 F7 6E  F6 8B D8 26 03 8F 46 02   .F.....n ...&..F.
2F60:  51 9A 1E 2A F2 0B 83 C4  02 89 46 F4 B8 1A 00 F7   Q..*.... ..F.....
2F70:  6E EE 8B D8 8E 06 0A 0B  B8 1A 00 F7 6E F6 8B F0   n....... ....n...
2F80:  26 8B 84 46 02 26 2B 87  46 02 99 52 50 52 50 9A   &..F.&+. F..RPRP.
2F90:  2E 2B F2 0B 8B C8 B8 1A  00 8B DA F7 6E EE 8B F0   .+...... ....n...
2FA0:  8E 06 0A 0B B8 1A 00 F7  6E F6 8B F8 26 8B 85 44   ........ n...&..D
2FB0:  02 26 2B 84 44 02 99 52  50 52 50 8B F1 8B FB 9A   .&+.D..R PRP.....
2FC0:  2E 2B F2 0B 03 F0 13 FA  57 56 9A 34 01 56 08 83   .+...... WV.4.V..
2FD0:  C4 04 89 46 EC B8 1A 00  F7 6E FC 8B D8 8E 06 08   ...F.... .n......
2FE0:  0B B8 1A 00 F7 6E FE 8B  F0 26 8B 84 9C 8B 26 2B   .....n.. .&....&+
2FF0:  87 9C 8B 99 52 50 52 50  9A 2E 2B F2 0B 8B C8 B8   ....RPRP ..+.....
3000:  1A 00 8B DA F7 6E FC 8B  F0 8E 06 08 0B B8 1A 00   .....n.. ........
3010:  F7 6E FE 8B F8 26 8B 85  9A 8B 26 2B 84 9A 8B 99   .n...&.. ..&+....
3020:  52 50 52 50 8B F1 8B FB  9A 2E 2B F2 0B 03 F0 13   RPRP.... ..+.....
3030:  FA 57 56 9A 34 01 56 08  83 C4 04 89 46 F8 8B 46   .WV.4.V. ....F..F
3040:  EC 2B 46 F8 50 9A 1E 2A  F2 0B 83 C4 02 89 46 D8   .+F.P..* ......F.
3050:  B8 1A 00 F7 6E EE 8B D8  8E 06 0A 0B 26 FF B7 46   ....n... ....&..F
3060:  02 B8 1A 00 F7 6E EE 8B  D8 26 FF B7 44 02 B8 1A   .....n.. .&..D...
3070:  00 F7 6E F6 8B D8 26 FF  B7 46 02 B8 1A 00 F7 6E   ..n...&. .F.....n
3080:  F6 8B D8 26 FF B7 44 02  B8 1A 00 F7 6E FC 8B D8   ...&..D. ....n...
3090:  8E 06 08 0B 26 FF B7 9C  8B B8 1A 00 F7 6E FC 8B   ....&... .....n..
30A0:  D8 26 FF B7 9A 8B B8 1A  00 F7 6E FE 8B D8 26 FF   .&...... ..n...&.
30B0:  B7 9C 8B B8 1A 00 F7 6E  FE 8B D8 26 FF B7 9A 8B   .......n ...&....
30C0:  9A 84 01 87 08 83 C4 10  50 9A 1E 2A F2 0B 83 C4   ........ P..*....
30D0:  02 89 46 EA 83 7E FA 14  7C 03 E9 FF 00 83 7E F4   ..F..~.. |.....~.
30E0:  14 7C 03 E9 F6 00 83 7E  D8 14 7C 03 E9 ED 00 FF   .|.....~ ..|.....
30F0:  76 EA 9A 1E 2A F2 0B 83  C4 02 3D 12 00 7C 03 E9   v...*... ..=..|..
3100:  DA 00 8E 06 04 0B B1 03  8B 5E E4 D3 E3 26 C7 87   ........ .^...&..
3110:  9C 6C 01 00 8B 5E E2 D3  E3 26 C7 87 9C 6C 01 00   .l...^.. .&...l..
3120:  83 7E EC 00 7F 03 E9 09  00 FF 46 F2 8B 46 D8 01   .~...... ..F..F..
3130:  46 E6 8B 46 E8 39 46 D8  7C 03 E9 1D 00 8B 46 F0   F..F.9F. |.....F.
3140:  39 46 EC 7D 03 E9 12 00  8B 46 D8 89 46 E8 8B 46   9F.}.... .F..F..F
3150:  EC 89 46 F0 8B 46 E2 89  46 D6 C7 46 DC 00 00 E9   ..F..F.. F..F....
3160:  03 00 FF 46 DC 8E 06 06  0B 8B 46 DC 26 39 06 A6   ...F.... ..F.&9..
3170:  F9 7F 03 E9 66 00 8B 46  E4 39 46 DC 75 03 E9 0B   ....f..F .9F.u...
3180:  00 8B 46 E2 39 46 DC 74  03 E9 03 00 E9 D3 FF 8E   ..F.9F.t ........
3190:  06 04 0B B1 03 8B 5E E2  D3 E3 26 8B 87 98 6C 8B   ......^. ..&...l.
31A0:  5E DC D3 E3 26 39 87 98  6C 75 03 E9 19 00 8B 5E   ^...&9.. lu.....^
31B0:  E2 D3 E3 26 8B 87 9A 6C  8B 5E DC D3 E3 26 39 87   ...&...l .^...&9.
31C0:  9A 6C 74 03 E9 12 00 8E  06 04 0B B1 03 8B 5E DC   .lt..... ......^.
31D0:  D3 E3 26 C7 87 9C 6C FF  FF E9 86 FF E9 6D FC 8B   ..&...l. .....m..
31E0:  46 F2 39 46 DE 7D 03 E9  1F 00 8B 46 F2 39 46 DE   F.9F.}.. ...F.9F.
31F0:  74 03 E9 AB 00 8B 46 E6  39 46 E0 7F 03 E9 A0 00   t.....F. 9F......
3200:  83 7E D6 FF 7F 03 E9 97  00 8E 06 04 0B B1 03 8B   .~...... ........
3210:  5E E4 D3 E3 26 8B 87 9A  6C C4 5E 0E 26 89 07 8E   ^...&... l.^.&...
3220:  06 04 0B 8B 5E D6 D3 E3  26 8B 87 9A 6C C4 5E 12   ....^... &...l.^.
3230:  26 89 07 8E 06 04 0B 8B  5E E4 D3 E3 26 8B 87 98   &....... ^...&...
3240:  6C C4 5E 06 26 89 07 8E  06 04 0B 8B 5E D6 D3 E3   l.^.&... ....^...
3250:  26 8B 87 98 6C C4 5E 0A  26 89 07 8B 46 F2 89 46   &...l.^. &...F..F
```

```
3260:  DE 8B 46 E6 89 46 E0 C7  46 DC 00 00 E9 03 00 FF   ..F..F.. F.......
3270:  46 DC 8E 06 06 0B 8B 46  DC 26 39 06 A6 F9 7F 03   F......F .&9.....
3280:  E9 1D 00 8E 06 04 0B B1  03 8B 5E DC D3 E3 26 8B   ........ ..^...&.
3290:  87 9C 6C 8B 5E DC D3 E3  26 89 87 9E 6C E9 CF FF   ..l.^... &...l...
32A0:  E9 24 FB C7 46 DA 00 00  C7 46 DC 00 00 E9 03 00   .$..F... .F......
32B0:  FF 46 DC 8E 06 06 0B 8B  46 DC 26 39 06 A6 F9 7F   .F...... F.&9....
32C0:  03 E9 9F 00 8E 06 04 0B  B1 03 8B 5E DC D3 E3 26   ........ ...^...&
32D0:  83 BF 9E 6C 00 7F 03 E9  86 00 8B 5E DC D3 E3 26   ...l.... ...^...&
32E0:  8B 87 9A 6C 89 46 FE 8B  5E DC D3 E3 26 8B 87 98   ...l.F.. ^...&...
32F0:  6C 89 46 F6 B8 1A 00 F7  6E FE 8B D8 8E 06 08 0B   l.F..... n.......
3300:  26 8B 87 9A 8B 8B C8 B8  1A 00 F7 6E F6 8B D8 8E   &....... ...n....
3310:  06 0A 0B 26 2B 8F 44 02  89 4E FA B8 1A 00 F7 6E   ...&+.D. .N.....n
3320:  FE 8B D8 8E 06 08 0B 26  8B 87 9C 8B 8B C8 B8 1A   .......& ........
3330:  00 F7 6E F6 8B D8 8E 06  0A 0B 26 2B 8F 46 02 89   ..n..... ..&+.F..
3340:  4E F4 83 7E DA 0A 7C 03  E9 15 00 B8 01 00 50 FF   N..~..|. ......P.
3350:  76 F4 FF 76 FA 9A 9B 28  FB 03 83 C4 06 FF 46 DA   v..v...( ......F.
3360:  E9 4D FF 83 7E DE 00 7F  03 E9 23 00 FF 76 E8 C4   .M..~... ..#..v..
3370:  5E 0A 26 FF 37 C4 5E 06  26 FF 37 C4 5E 12 26 FF   ^.&.7.^. &.7.^.&.
3380:  37 C4 5E 0E 26 FF 37 9A  9A 25 FB 03 83 C4 0A 8B   7.^.&.7. .%......
3390:  46 DE E9 00 00 5E 5F 8B  E5 5D CB 55 8B EC 81 EC   F....^_. .].U....
33A0:  08 00 57 56 FF 76 0E FF  76 14 FF 76 0C FF 76 0A   ..WV.v.. v..v..v.
33B0:  9A D6 01 D6 03 83 C4 08  89 46 F8 FF 76 0E FF 76   ........ .F..v..v
33C0:  18 FF 76 0C FF 76 0A 9A  D6 01 D6 03 83 C4 08 89   ..v..v.. ........
33D0:  46 FC C7 46 FE 00 00 8B  46 F8 89 46 FA E9 03 00   F..F.... F..F....
33E0:  FF 46 FA 8B 46 FC 39 46  FA 7E 03 E9 E8 00 81 7E   .F..F.9F .~.....~
33F0:  FE C8 00 7C 03 E9 DE 00  8B 76 FA 8B C6 D1 E6 03   ...|.... .v......
3400:  F0 D1 E6 C4 5E 0A 8B 46  16 26 39 40 02 7D 03 E9   ....^..F .&9@.}..
3410:  C1 00 8B 76 FA 8B C6 D1  E6 03 F0 D1 E6 C4 5E 0A   ...v.... ......^.
3420:  8B 46 1A 26 39 40 02 7E  03 E9 A7 00 B8 1A 00 8B   .F.&9@.~ ........
3430:  76 FA 8B CE D1 E6 03 F1  D1 E6 C4 5E 0A 26 F7 68   v....... ...^.&.h
3440:  04 8B F0 C4 5E 06 26 F6  40 18 01 75 03 E9 83 00   ....^.&. @..u....
3450:  B8 1A 00 8B 76 FA 8B CE  D1 E6 03 F1 D1 E6 C4 5E   ....v... .......^
3460:  0A 26 F7 68 04 8B F0 C4  5E 06 26 F6 40 18 10 75   .&.h.... ^.&.@..u
3470:  03 E9 5F 00 8E 06 FA 0A  26 83 3E 9E 01 00 75 03   .._..... &.>...u.
3480:  E9 2D 00 83 7E 1C 00 75  03 E9 24 00 B8 1A 00 8B   .-..~..u ..$.....
3490:  76 FA 8B CE D1 E6 03 F1  D1 E6 C4 5E 0A 26 F7 68   v....... ...^.&.h
34A0:  04 8B F0 C4 5E 06 26 F6  40 18 80 75 03 E9 23 00   ....^.&. @..u..#.
34B0:  8B 76 FE D1 E6 D1 E6 C4  5E 10 26 C7 40 02 00 00   .v...... ^.&.@...
34C0:  8B 5E FE D1 E3 D1 E3 C4  76 10 8B 46 FA 26 89 00   .^...... v..F.&..
34D0:  FF 46 FE E9 0A FF 8B 46  FE E9 00 00 5E 5F 8B E5   .F.....F ....^_..
34E0:  5D CB 55 8B EC 81 EC 16  00 57 56 C7 46 FE 00 00   ].U..... .WV.F...
34F0:  C7 46 EE 00 00 E9 03 00  FF 46 EE 8B 46 08 39 46   .F...... .F..F.9F
3500:  EE 7C 03 E9 F7 02 81 7E  FE C8 00 7C 03 E9 ED 02   .|.....~ ...|....
3510:  8E 06 FE 0A 8B 5E EE D1  E3 D1 E3 26 8B 9F 68 69   .....^.. ...&..hi
3520:  8B C3 D1 E3 03 D8 D1 E3  8E 06 0A 0B 26 8B 87 88   ........ ....&...
3530:  53 89 46 F8 B8 1A 00 F7  6E F8 8B D8 26 F6 87 5C   S.F..... n...&..\
3540:  02 08 75 03 E9 1E 00 B8  7A 00 B9 AE 0E 51 50 B8   ..u..... z....QP.
3550:  1A 00 F7 6E F8 05 48 02  06 50 9A 0A 00 D6 03 83   ...n..H. .P......
3560:  C4 08 E9 44 00 B8 1A 00  F7 6E F8 8B D8 8E 06 0A   ...D.... .n......
3570:  0B 26 8B 87 50 02 8B C8  B8 1A 00 F7 6E F8 8B D8   .&..P... ....n...
3580:  26 3B 8F 56 02 7C 03 E9  05 00 26 8B 8F 56 02 B8   &;.V.|.. ..&..V..
3590:  1A 00 F7 6E F8 8B D8 26  3B 8F 4A 02 7C 03 E9 05   ...n...& ;.J.|...
35A0:  00 26 8B 8F 4A 02 89 4E  F0 C7 46 F2 00 00 E9 03   .&..J..N ..F.....
35B0:  00 FF 46 F2 8B 46 06 39  46 F2 7C 03 E9 3B 02 81   ..F..F.9 F.|..;..
```

```
35C0:  7E FE C8 00 7C 03 E9 31  02 8E 06 02 0B 8B 5E F2   ~...|..1 ......^.
35D0:  D1 E3 D1 E3 26 8B 9F 46  66 8B C3 D1 E3 03 D8 D1   ....&..F f.......
35E0:  E3 8E 06 08 0B 26 8B 87  DE DC 89 46 FC 8E 06 FE   .....&.. ...F....
35F0:  0A 8B 5E EE D1 E3 D1 E3  26 8B 9F 68 69 8B C3 D1   ..^..... &..hi...
3600:  E3 03 D8 D1 E3 8E 06 0A  0B 26 8B 87 84 53 89 46   ........ .&...S.F
3610:  EC 8E 06 FE 0A 8B 5E EE  D1 E3 D1 E3 26 8B 9F 68   ......^. ....&..h
3620:  69 8B C3 D1 E3 03 D8 D1  E3 8E 06 0A 0B 26 8B 87   i....... .....&..
3630:  86 53 89 46 EA B8 1A 00  F7 6E FC 8B D8 8E 06 08   .S.F.... .n......
3640:  0B 8B 46 EC 26 2B 87 9A  8B 89 46 FA B8 1A 00 F7   ..F.&+.. ..F.....
3650:  6E FC 8B D8 8B 46 EA 26  2B 87 9C 8B 89 46 F6 FF   n....F.& +....F..
3660:  76 FA 9A 1E 2A F2 0B 83  C4 02 3D 2D 00 7E 03 E9   v...*... ..=-.~..
3670:  13 00 FF 76 F6 9A 1E 2A  F2 0B 83 C4 02 3D 2D 00   ...v...* .....=-.
3680:  7F 03 E9 03 00 E9 29 FF  B8 1A 00 F7 6E F8 8B D8   ......). ....n...
3690:  8E 06 0A 0B 26 F6 87 5C  02 08 74 03 E9 17 00 B8   ....&..\ ..t.....
36A0:  1A 00 F7 6E FC 8B D8 8E  06 08 0B 26 F6 87 B2 8B   ...n.... ...&....
36B0:  08 74 03 E9 2E 00 B8 1A  00 F7 6E F8 8B D8 8E 06   .t...... ..n.....
36C0:  0A 0B 26 F6 87 5C 02 08  75 03 E9 1A 00 B8 1A 00   ..&..\.. u.......
36D0:  F7 6E FC 8B D8 8E 06 08  0B 26 F6 87 B2 8B 08 74   .n...... .&.....t
36E0:  03 E9 03 00 E9 CA FE B8  1A 00 F7 6E FC 8B D8 8E   ........ ...n....
36F0:  06 08 0B 26 F6 87 B2 8B  08 75 03 E9 7B 00 B8 1A   ...&.... .u..{...
3700:  00 F7 6E F8 8B D8 8E 06  0A 0B 26 F6 87 5C 02 08   ..n..... ..&..\..
3710:  75 03 E9 64 00 B8 72 00  B9 AE 0E 51 50 B8 1A 00   u..d..r. ...QP...
3720:  F7 6E FC 05 9E 8B BA AE  0E 52 50 9A 0A 00 D6 03   .n...... .RP.....
3730:  83 C4 08 B8 72 00 B9 AE  0E 51 50 B8 7A 00 B9 AE   ....r... .QP.z...
3740:  0E 51 50 9A 3B 01 D6 03  83 C4 08 3D 00 00 75 03   .QP.;... ...=..u.
3750:  E9 23 00 8B 46 FC 8E 06  04 0B B1 03 8B 5E FE D3   .#..F... .....^..
3760:  E3 26 89 87 9A 6C 8B 46  F8 8B 5E FE D3 E3 26 89   .&...l.F ..^...&.
3770:  87 98 6C FF 46 FE E9 7E  00 B8 1A 00 F7 6E FC 8B   ..l.F..~ .....n..
3780:  D8 8E 06 08 0B 26 8B 87  A6 8B 8B C8 B8 1A 00 F7   .....&.. ........
3790:  6E FC 8B D8 26 3B 8F AC  8B 7C 03 E9 05 00 26 8B   n...&;.. .|....&.
37A0:  8F AC 8B B8 1A 00 F7 6E  FC 8B D8 26 3B 8F A0 8B   .......n ...&;...
37B0:  7C 03 E9 05 00 26 8B 8F  A0 8B 89 4E F4 8B 46 F4   |....&.. ...N..F.
37C0:  2B 46 F0 50 9A 1E 2A F2  0B 83 C4 02 3D 12 00 7C   +F.P..*. ....=..|
37D0:  03 E9 23 00 8B 46 FC 8E  06 04 0B B1 03 8B 5E FE   ..#..F.. ......^.
37E0:  D3 E3 26 89 87 9A 6C 8B  46 F8 8B 5E FE D3 E3 26   ..&...l. F..^...&
37F0:  89 87 98 6C FF 46 FE E9  B7 FD E9 FB FC 8B 46 FE   ...l.F.. ......F.
3800:  8E 06 06 0B 26 A3 A6 F9  5E 5F 8B E5 5D CB 55 8B   ....&... ^_..].U.
3810:  EC 81 EC 16 00 57 56 B8  00 00 C4 5E 0E 26 89 07   .....WV. ...^.&..
3820:  C4 5E 0A 26 89 07 C7 46  EE 00 00 E9 03 00 FF 46   .^.&...F .......F
3830:  EE 8B 46 08 39 46 EE 7C  03 E9 43 05 8E 06 FE 0A   ..F.9F.| ..C.....
3840:  8B 5E EE D1 E3 D1 E3 26  83 BF 6A 69 00 75 03 E9   .^.....& ..ji.u..
3850:  03 00 E9 D9 FF 8E 06 FE  0A 8B 5E EE D1 E3 D1 E3   ........ ..^.....
3860:  26 8B 9F 68 69 8B C3 D1  E3 03 D8 D1 E3 8E 06 0A   &..hi... ........
3870:  0B 26 8B 87 88 53 89 46  FA C7 46 F6 00 00 B8 1A   .&...S.F ..F.....
3880:  00 F7 6E FA 8B D8 26 F6  87 5C 02 08 75 03 E9 1E   ..n...&. .\..u...
3890:  00 B8 7A 00 B9 AE 0E 51  50 B8 1A 00 F7 6E FA 05   ..z....Q P....n..
38A0:  48 02 06 50 9A 0A 00 D6  03 83 C4 08 E9 44 00 B8   H..P.... .....D..
38B0:  1A 00 F7 6E FA 8B D8 8E  06 0A 0B 26 8B 87 56 02   ...n.... ...&..V.
38C0:  8B C8 B8 1A 00 F7 6E FA  8B D8 26 3B 8F 50 02 7C   ......n. ..&;.P.|
38D0:  03 E9 05 00 26 8B 8F 50  02 B8 1A 00 F7 6E FA 8B   ....&..P .....n..
38E0:  D8 26 3B 8F 4A 02 7C 03  E9 05 00 26 8B 8F 4A 02   .&;.J.|. ...&..J.
38F0:  89 4E F0 C7 46 F2 00 00  E9 03 00 FF 46 F2 8B 46   .N..F... ....F..F
3900:  06 39 46 F2 7C 03 E9 88  03 8E 06 02 0B 8B 5E F2   .9F.|... ......^.
3910:  D1 E3 D1 E3 26 83 BF 48  66 00 75 03 E9 03 00 E9   ....&..H f.u.....
```

```
3920:  D9 FF 8E 06 02 0B 8B 5E  F2 D1 E3 D1 E3 26 8B 9F   .......^ .....&..
3930:  46 66 8B C3 D1 E3 03 D8  D1 E3 8E 06 08 0B 26 8B   Ff...... ......&.
3940:  87 DE DC 89 46 FE 8E 06  FE 0A 8B 5E EE D1 E3 D1   ....F... ...^....
3950:  E3 26 8B 9F 68 69 8B C3  D1 E3 03 D8 D1 E3 8E 06   .&..hi.. ........
3960:  0A 0B 26 8B 87 84 53 89  46 EC 8E 06 FE 0A 8B 5E   ..&...S. F......^
3970:  EE D1 E3 D1 E3 26 8B 9F  68 69 8B C3 D1 E3 03 D8   .....&.. hi......
3980:  D1 E3 8E 06 0A 0B 26 8B  87 86 53 89 46 EA B8 1A   ......&. ..S.F...
3990:  00 F7 6E FE 8B D8 8E 06  08 0B 8B 46 EC 26 2B 87   ..n..... ...F.&+.
39A0:  9A 8B 89 46 FC B8 1A 00  F7 6E FE 8B D8 8B 46 EA   ...F.... .n....F.
39B0:  26 2B 87 9C 8B 89 46 F8  FF 76 FC 9A 1E 2A F2 0B   &+....F. .v...*..
39C0:  83 C4 02 3D 14 00 7E 03  E9 13 00 FF 76 F8 9A 1E   ...=..~. ....v...
39D0:  2A F2 0B 83 C4 02 3D 14  00 7F 03 E9 03 00 E9 1A   *.....=. ........
39E0:  FF B8 1A 00 F7 6E FA 8B  D8 8E 06 0A 0B 26 F6 87   .....n.. .....&..
39F0:  5C 02 08 74 03 E9 1A 00  B8 1A 00 F7 6E FE 8B D8   \..t.... ....n...
3A00:  8E 06 08 0B 26 F6 87 B2  8B 08 75 03 E9 03 00 E9   ....&... ..u.....
3A10:  E9 FE B8 1A 00 F7 6E FE  8B D8 8E 06 08 0B 26 F6   ......n. ......&.
3A20:  87 B2 8B 08 75 03 E9 BF  00 B8 1A 00 F7 6E FA 8B   ....u... .....n..
3A30:  D8 8E 06 0A 0B 26 F6 87  5C 02 08 75 03 E9 A8 00   .....&.. \..u....
3A40:  B8 72 00 B9 AE 0E 51 50  B8 1A 00 F7 6E FE 05 9E   .r....QP ....n...
3A50:  8B BA AE 0E 52 50 9A 0A  00 D6 03 83 C4 08 B8 72   ....RP.. .......r
3A60:  00 B9 AE 0E 51 50 B8 7A  00 B9 AE 0E 51 50 9A 3B   ....QP.z ....QP.;
3A70:  01 D6 03 83 C4 08 3D 00  00 75 03 E9 67 00 C4 5E   ......=. .u..g..^
3A80:  0A 26 FF 07 C4 5E 0E 26  FF 07 8E 06 FE 0A 8B 5E   .&...^.& .......^
3A90:  EE D1 E3 D1 E3 26 C7 87  6A 69 01 00 8E 06 02 0B   .....&.. ji......
3AA0:  8B 5E F2 D1 E3 D1 E3 26  C7 87 48 66 01 00 FF 76   .^.....& ..Hf...v
3AB0:  FC 9A 1E 2A F2 0B 83 C4  02 99 8E 06 0C 0B 26 01   ...*.... ......&.
3AC0:  06 6A F9 26 11 16 6C F9  FF 76 F8 9A 1E 2A F2 0B   .j.&..l. .v...*..
3AD0:  83 C4 02 99 8E 06 0E 0B  26 01 06 A0 F9 26 11 16   ........ &....&..
3AE0:  A2 F9 E9 AC 01 E9 A6 01  B8 1A 00 F7 6E FE 8B D8   ........ ....n...
3AF0:  8E 06 08 0B 26 F6 87 B2  8B 08 74 03 E9 D6 00 B8   ....&... ..t.....
3B00:  1A 00 F7 6E FA 8B D8 8E  06 0A 0B 26 F6 87 5C 02   ...n.... ...&..\.
3B10:  08 74 03 E9 BF 00 B8 1A  00 F7 6E FE 8B D8 8E 06   .t...... ..n.....
3B20:  08 0B 26 8B 87 AC 8B 8B  C8 B8 1A 00 F7 6E FE 8B   ..&..... .....n..
3B30:  D8 26 3B 8F A6 8B 7C 03  E9 05 00 26 8B 8F A6 8B   .&;...|. ...&....
3B40:  B8 1A 00 F7 6E FE 8B D8  26 3B 8F A0 8B 7C 03 E9   ....n... &;...|..
3B50:  05 00 26 8B 8F A0 8B 89  4E F4 8B 46 F4 2B 46 F0   ..&..... N..F.+F.
3B60:  50 9A 1E 2A F2 0B 83 C4  02 3D 12 00 7C 03 E9 61   P..*.... .=..|..a
3B70:  00 C4 5E 0A 26 FF 07 8E  06 FE 0A 8B 5E EE D1 E3   ..^.&... ....^...
3B80:  D1 E3 26 C7 87 6A 69 01  00 8E 06 02 0B 8B 5E F2   ..&..ji. ......^.
3B90:  D1 E3 D1 E3 26 C7 87 48  66 01 00 FF 76 FC 9A 1E   ....&..H f...v...
3BA0:  2A F2 0B 83 C4 02 99 8E  06 0C 0B 26 01 06 6A F9   *....... ...&..j.
3BB0:  26 11 16 6C F9 FF 76 F8  9A 1E 2A F2 0B 83 C4 02   &..l..v. ..*.....
3BC0:  99 8E 06 0E 0B 26 01 06  A0 F9 26 11 16 A2 F9 E9   .....&.. ..&.....
3BD0:  BF 00 E9 B9 00 B8 1A 00  F7 6E FE 8B D8 8E 06 08   ........ .n......
3BE0:  0B 26 8B 87 AC 8B 8B C8  B8 1A 00 F7 6E FE 8B D8   .&...... ....n...
3BF0:  26 3B 8F A6 8B 7C 03 E9  05 00 26 8B 8F A6 8B B8   &;...|.. ..&.....
3C00:  1A 00 F7 6E FE 8B D8 26  3B 8F A0 8B 7C 03 E9 05   ...n...& ;...|...
3C10:  00 26 8B 8F A0 8B 89 4E  F4 B8 1A 00 F7 6E FA 8B   .&.....N .....n..
3C20:  D8 8E 06 0A 0B 26 8B 87  4A 02 2B 46 F4 50 9A 1E   .....&.. J.+F.P..
3C30:  2A F2 0B 83 C4 02 3D 12  00 7D 03 E9 4A 00 B8 1A   *.....=. .}..J...
3C40:  00 F7 6E FA 8B D8 8E 06  0A 0B 26 8B 87 50 02 2B   ..n..... ..&..P.+
3C50:  46 F4 50 9A 1E 2A F2 0B  83 C4 02 3D 12 00 7D 03   F.P..*.. ...=..}.
3C60:  E9 25 00 B8 1A 00 F7 6E  FA 8B D8 8E 06 0A 0B 26   .%.....n .......&
3C70:  8B 87 56 02 2B 46 F4 50  9A 1E 2A F2 0B 83 C4 02   ..V.+F.P ..*.....
```

```
ENROLL.DMP          Thursday, January  6, 1994  12:03pm                Page 19

3C80:  3D 12 00 7C 03 E9 06 00  8B 46 F2 89 46 F6 E9 6A   =..|.... .F..F..j
3C90:  FC 8E 06 FE 0A 8B 5E EE  D1 E3 D1 E3 26 83 BF 6A   ......^. ....&..j
3CA0:  69 00 74 03 E9 D5 00 83  7E F6 00 7F 03 E9 CC 00   i.t..... ~.......
3CB0:  C4 5E 0A 26 FF 07 8B 46  F6 89 46 F2 8E 06 02 0B   .^.&...F ..F.....
3CC0:  8B 5E F2 D1 E3 D1 E3 26  8B 9F 46 66 8B C3 D1 E3   .^.....& ..Ff....
3CD0:  03 D8 D1 E3 8E 06 08 0B  26 8B 87 DE DC 89 46 FE   ........ &.....F.
3CE0:  8E 06 FE 0A 8B 5E EE D1  E3 D1 E3 26 C7 87 6A 69   .....^.. ...&..ji
3CF0:  01 00 8E 06 02 0B 8B 5E  F2 D1 E3 D1 E3 26 C7 87   .......^ .....&..
3D00:  48 66 01 00 B8 1A 00 F7  6E FE 8B D8 8E 06 08 0B   Hf...... n.......
3D10:  26 8B 87 9A 8B 8B C8 B8  1A 00 F7 6E FA 8B D8 8E   &....... ...n....
3D20:  06 0A 0B 26 2B 8F 44 02  51 9A 1E 2A F2 0B 83 C4   ...&+.D. Q..*....
3D30:  02 99 8E 06 0C 0B 26 01  06 6A F9 26 11 16 6C F9   ......&. .j.&..l.
3D40:  B8 1A 00 F7 6E FE 8B D8  8E 06 08 0B 26 8B 87 9C   ....n... ....&...
3D50:  8B 8B C8 B8 1A 00 F7 6E  FA 8B D8 8E 06 0A 0B 26   .......n .......&
3D60:  2B 8F 46 02 51 9A 1E 2A  F2 0B 83 C4 02 99 8E 06   +.F.Q..* ........
3D70:  0E 0B 26 01 06 A0 F9 26  11 16 A2 F9 E9 AF FA 5E   ..&....& .......^
3D80:  5F 8B E5 5D CB 55 8B EC  81 EC 24 00 57 56 B8 00   _..].U.. ..$.WV..
3D90:  00 8E 06 10 0B 26 A3 50  00 8E 06 12 0B 26 A3 30   .....&.P .....&.0
3DA0:  88 B8 00 00 8E 06 14 0B  26 A3 B6 89 26 A3 B4 89   ........ &...&...
3DB0:  B8 00 00 BA 00 00 8E 06  0E 0B 26 A3 A0 F9 26 89   ........ ..&...&.
3DC0:  16 A2 F9 8E 06 0C 0B 26  A3 6A F9 26 89 16 6C F9   .......& .j.&..l.
3DD0:  C7 46 FA 02 00 C7 46 F8  03 00 8D 46 F4 16 50 8D   .F....F. ...F..P.
3DE0:  4E F6 16 51 9A BF 05 33  0A 83 C4 08 8B 46 F6 99   N..Q...3 .....F..
3DF0:  F7 7E FA 89 46 F2 8B 46  F4 99 F7 7E F8 89 46 F0   .~..F..F ...~..F.
3E00:  C7 46 EA 00 00 C7 46 EC  00 00 8B 46 F2 89 46 E2   .F....F. ...F..F.
3E10:  8B 46 F0 89 46 E4 C7 46  E0 00 00 C7 46 E8 01 00   .F..F..F ....F...
3E20:  E9 03 00 FF 46 E8 83 7E  E8 02 7E 03 E9 34 01 C7   ....F..~ ..~..4..
3E30:  46 E6 01 00 E9 03 00 FF  46 E6 83 7E E6 03 7E 03   F....... F..~..~.
3E40:  E9 06 01 B8 00 00 50 FF  76 E4 FF 76 E2 FF 76 EC   ......P. v..v..v.
3E50:  FF 76 EA B8 46 66 B9 AE  0E 51 50 8E 06 08 0B 26   .v..Ff.. .QP....&
3E60:  A1 E6 89 48 50 B8 DA DC  06 50 B8 9A 8B 06 50 9A   ...HP... .P....P.
3E70:  AB 08 8F 02 83 C4 18 89  46 DC 8E 06 0A 0B 26 83   ........ F.....&.
3E80:  3E 9C 00 01 1B C0 40 89  46 DE FF 76 DE FF 76 E4   >.....@. F..v..v.
3E90:  FF 76 E2 FF 76 EC FF 76  EA B8 68 69 B9 AE 0E 51   .v..v..v ..hi...Q
3EA0:  50 8E 06 0A 0B 26 A1 90  00 48 50 B8 84 53 06 50   P....&.. .HP..S.P
3EB0:  B8 44 02 06 50 9A AB 08  8F 02 83 C4 18 89 46 FC   .D..P... ......F.
3EC0:  8D 46 EE 16 50 8D 4E FE  16 51 FF 76 FC FF 76 DC   .F..P.N. .Q.v..v.
3ED0:  9A 1E 0D 8F 02 83 C4 0C  8B 46 FE 8E 06 16 0B 8B   ........ .F......
3EE0:  5E E0 D1 E3 26 89 87 CE  F9 8B 46 FC 8E 06 18 0B   ^...&... ..F.....
3EF0:  8B 5E E0 D1 E3 26 89 87  44 00 8B 46 DC 8E 06 1A   .^...&.. D..F....
3F00:  0B 8B 5E E0 D1 E3 26 89  87 2C 00 FF 46 E0 8B 46   ..^...&. .,..F..F
3F10:  F0 01 46 EC 8B 46 F0 01  46 E4 8B 46 FE 8E 06 14   ..F..F.. F..F....
3F20:  0B 26 01 06 B6 89 8B 46  EE 26 01 06 B4 89 8B 46   .&.....F .&.....F
3F30:  FC 8E 06 10 0B 26 01 06  50 00 8B 46 DC 8E 06 12   .....&.. P..F....
3F40:  0B 26 01 06 30 88 E9 EE  FE C7 46 EC 00 00 8B 46   .&..0... ..F....F
3F50:  F0 89 46 E4 8B 46 F2 01  46 EA 8B 46 F2 01 46 E2   ..F..F.. F..F..F.
3F60:  E9 C0 FE 5E 5F 8B E5 5D  CB 00 55 8B EC 81 EC 02   ...^_..] ..U.....
3F70:  00 57 56 C7 46 FE 00 00  E9 03 00 FF 46 FE 83 7E   .WV.F... ....F..~
3F80:  FE 03 7C 03 E9 10 00 8B  5E FE D1 E3 C4 76 0A 26   ..|..... ^....v.&
3F90:  C7 00 18 FC E9 E4 FF C7  46 FE 00 00 E9 03 00 FF   ........ F.......
3FA0:  46 FE 83 7E FE 03 7C 03  E9 EA 00 C4 5E 0A 26 81   F..~..|. ....^.&.
3FB0:  3F 18 FC 74 03 E9 59 00  C4 5E 06 26 8B 47 08 C4   ?..t..Y. .^.&.G..
3FC0:  5E 06 26 3B 47 0E 7C 03  E9 04 00 26 8B 47 0E C4   ^.&;G.|. ...&.G..
3FD0:  5E 06 26 3B 47 02 7C 03  E9 04 00 26 8B 47 02 8B   ^.&;G.|. ...&.G..
```

```
3FE0:  76 FE 8B CE D1 E6 03 F1  D1 E6 C4 5E 06 26 3B 40   v....... ...^.&;@
3FF0:  02 74 03 E9 1B 00 8B 76  FE 8B C6 D1 E6 03 F0 D1   .t.....v ........
4000:  E6 C4 5E 06 26 8B 40 02  C4 5E 0A 26 89 07 E9 81   ..^.&.@. .^.&....
4010:  00 C4 5E 0A 26 81 7F 04  18 FC 74 03 E9 5A 00 C4   ..^.&... ..t..Z..
4020:  5E 06 26 8B 47 08 C4 5E  06 26 3B 47 0E 7F 03 E9   ^.&.G..^ .&;G....
4030:  04 00 26 8B 47 0E C4 5E  06 26 3B 47 02 7F 03 E9   ..&.G..^ .&;G....
4040:  04 00 26 8B 47 02 8B 76  FE 8B CE D1 E6 03 F1 D1   ..&.G..v ........
4050:  E6 C4 5E 06 26 3B 40 02  74 03 E9 1C 00 8B 76 FE   ..^.&;@. t.....v.
4060:  8B C6 D1 E6 03 F0 D1 E6  C4 5E 06 26 8B 40 02 C4   ........ .^.&.@..
4070:  5E 0A 26 89 47 04 E9 19  00 8B 76 FE 8B C6 D1 E6   ^.&.G... ..v.....
4080:  03 F0 D1 E6 C4 5E 06 26  8B 40 02 C4 5E 0A 26 89   .....^.& .@..^.&.
4090:  47 02 E9 0A FF 5E 5F 8B  E5 5D CB 55 8B EC 81 EC   G....^_. .].U....
40A0:  04 00 57 56 C7 46 FE 00  00 C7 46 FC 00 00 E9 03   ..WV.F.. ..F.....
40B0:  00 FF 46 FC 83 7E FC 03  7C 03 E9 5E 00 8B 5E FC   ..F..~.. |..^..^.
40C0:  D1 E3 C4 76 0A 26 8B 00  8B 5E FC D1 E3 C4 76 06   ...v.&.. .^....v.
40D0:  26 2B 00 F7 D8 50 9A 1E  2A F2 0B 83 C4 02 3D 24   &+...P.. *.....=$
40E0:  00 7F 03 E9 06 00 B8 00  00 E9 44 00 8B 5E FC D1   ........ ..D..^..
40F0:  E3 C4 76 0A 26 8B 00 8B  5E FC D1 E3 C4 76 06 26   ..v.&... ^....v.&
4100:  2B 00 F7 D8 50 9A 1E 2A  F2 0B 83 C4 02 3D 12 00   +...P..* .....=..
4110:  7F 03 E9 03 00 FF 46 FE  E9 96 FF 83 7E FE 01 7F   ......F. ....~...
4120:  03 E9 06 00 B8 00 00 E9  06 00 B8 01 00 E9 00 00   ........ ........
4130:  5E 5F 8B E5 5D CB 55 8B  EC 81 EC 06 00 57 56 C7   ^_..].U. .....WV.
4140:  46 FA 00 00 8B 46 0C 89  46 FC 8B 46 FA 39 46 FC   F....F.. F..F.9F.
4150:  7E 03 E9 06 00 8B 46 FA  E9 5A 00 8B 46 FC 03 46   ~.....F. .Z..F..F
4160:  FA D1 F8 89 46 FE 8B 5E  FE 8B C3 D1 E3 03 D8 D1   ....F..^ ........
4170:  E3 C4 76 06 8B 46 0A 26  39 00 7C 03 E9 0A 00 8B   ..v..F.& 9.|.....
4180:  46 FE 40 89 46 FA E9 C1  FF 8B 5E FE 8B C3 D1 E3   F.@.F... ..^.....
4190:  03 D8 D1 E3 C4 76 06 8B  46 0A 26 39 00 7F 03 E9   .....v.. F.&9....
41A0:  0A 00 8B 46 FE 48 89 46  FC E9 9E FF 8B 46 FE E9   ...F.H.F .....F..
41B0:  03 00 E9 95 FF 5E 5F 8B  E5 5D CB 00 55 8B EC 81   .....^_. .]..U...
41C0:  EC 22 00 57 56 8D 46 EE  16 50 8D 4E F4 16 51 9A   .".WV.F. .P.N..Q.
41D0:  BF 05 33 0A 83 C4 08 8B  46 F4 B9 0A 00 99 F7 F9   ..3..... F.......
41E0:  A3 56 0C 8B 46 EE 99 F7  F9 A3 58 0C 8B 46 F4 D1   .V..F... ..X..F..
41F0:  F8 A3 5A 0C 8B 46 EE BB  03 00 99 F7 FB A3 5C 0C   ..Z..F.. ......\.
4200:  B8 0A 00 99 F7 3E 34 01  89 46 DE B8 1E 00 99 F7   .....>4. .F......
4210:  3E 34 01 89 46 E2 8E 06  1C 0B 26 C7 06 9C 89 00   >4..F... ..&.....
4220:  00 B8 00 00 8E 06 1E 0B  26 A3 44 66 8E 06 20 0B   ........ &.Df.. .
4230:  26 A3 B2 F1 B8 00 00 8E  06 1C 0B 26 A3 8E 89 26   &....... ...&...&
4240:  A3 96 89 26 C7 06 9A 89  00 00 26 C7 06 98 89 64   ...&.... ..&....d
4250:  00 B8 64 00 26 A3 92 89  26 A3 90 89 A1 56 0C D1   ..d.&... &....V..
4260:  F8 8E 06 22 0B 26 A3 06  F0 A1 58 0C D1 F8 8E 06   ...".&.. ..X.....
4270:  24 0B 26 A3 90 F0 A1 5A  0C 8E 06 26 0B 26 A3 8A   $.&....Z ...&.&..
4280:  00 A1 5C 0C 8E 06 28 0B  26 A3 8C 00 9A 25 0F FB   ..\...(. &....%..
4290:  03 8D 46 F0 16 50 8D 46  F6 16 50 8D 46 E8 16 50   ..F..P.F ..P.F..P
42A0:  8D 46 EA 16 50 9A F2 00  8F 02 83 C4 10 8E 06 1C   .F..P... ........
42B0:  0B 26 A3 8C 89 9A 66 03  FB 03 8E 06 1C 0B 26 83   .&....f. ......&.
42C0:  3E 94 89 00 74 03 E9 05  00 26 FF 06 94 89 8E 06   >...t... .&......
42D0:  2A 0B 26 A1 04 8A 8E 06  2C 0B 26 2B 06 AE 00 89   *.&..... ,.&+....
42E0:  46 FA 8E 06 2A 0B 26 A1  06 8A 8E 06 2C 0B 26 2B   F...*.&. ....,.&+
42F0:  06 B0 00 89 46 F8 8E 06  1C 0B 26 83 3E 94 89 03   ....F... ..&.>...
4300:  7F 03 E9 CB 00 B8 05 00  50 B8 64 0C 1E 50 B8 50   ........ P.d..P.P
4310:  00 50 B8 A0 00 50 B8 4C  88 B9 AE 0E 51 50 9A F1   .P...P.L ....QP..
4320:  0D FB 03 83 C4 0E A3 5E  0C FF 36 58 0C FF 36 56   .......^ ..6X..6V
4330:  0C B8 00 00 50 50 B8 62  0C 1E 50 B9 60 0C 1E 51   ....PP.b ..P.`..Q
```

```
4340:  FF 76 DE BA 00 00 BB 51  1E 53 52 9A F1 21 FB 03   .v.....Q .SR..!..
4350:  83 C4 16 8E 06 1C 0B 26  A3 96 89 26 A1 96 89 89   .......& ...&....
4360:  46 E6 8B 46 FA 2B 06 60  0C 50 9A 1E 2A F2 0B 83   F..F.+.` .P..*...
4370:  C4 02 3D 14 00 7C 03 E9  56 00 8B 46 F8 2B 06 62   ..=..|.. V..F.+.b
4380:  0C 50 9A 1E 2A F2 0B 83  C4 02 3D 14 00 7C 03 E9   .P..*... ..=..|..
4390:  3E 00 A1 60 0C 2B 46 FA  99 52 50 52 50 9A 2E 2B   >..`.+F. .RPRP..+
43A0:  F2 0B 8B C8 A1 62 0C 2B  46 F8 8B DA 99 52 50 52   .....b.+ F....RPR
43B0:  50 8B F1 8B FB 9A 2E 2B  F2 0B 03 F0 13 FA 57 56   P......+ ......WV
43C0:  9A 34 01 56 08 83 C4 04  8E 06 1C 0B 26 A3 90 89   .4.V.... ....&...
43D0:  8E 06 1C 0B 26 FF 36 96  89 9A 93 01 99 06 83 C4   ....&.6. ........
43E0:  02 3D 00 00 75 03 E9 24  00 8D 46 E0 16 50 8D 46   .=..u..$ ..F..P.F
43F0:  E4 16 50 8D 46 FC 16 50  8D 46 FE 16 50 9A 64 0F   ..P.F..P .F..P.d.
4400:  FB 03 83 C4 10 8E 06 1C  0B 26 A3 9C 89 8E 06 1C   ........ .&......
4410:  0B 26 83 3E 9C 89 00 7F  03 E9 14 00 FF 76 E0 FF   .&.>.... .....v..
4420:  76 E4 FF 76 FC FF 76 FE  9A 30 16 FB 03 83 C4 08   v..v..v. .0......
4430:  8E 06 1C 0B 26 83 3E 8C  89 01 7F 03 E9 A7 00 26   ....&.>. .......&
4440:  83 3E 9C 89 00 7F 03 E9  9C 00 B8 1A 00 F7 6E F6   .>...... ......n.
4450:  8B D8 8E 06 2A 0B 26 8B  87 9A 8B 8B C8 B8 1A 00   ....*.&. ........
4460:  F7 6E EA 8B D8 8E 06 2C  0B 26 2B 8F 44 02 89 4E   .n....., .&+.D..N
4470:  F2 B8 1A 00 F7 6E F6 8B  D8 8E 06 2A 0B 26 8B 87   .....n.. ...*.&..
4480:  9C 8B 8B C8 B8 1A 00 F7  6E EA 8B D8 8E 06 2C 0B   ........ n.....,.
4490:  26 2B 8F 46 02 89 4E EC  A1 60 0C 2B 46 F2 99 52   &+.F..N. .`.+F..R
44A0:  50 52 50 9A 2E 2B F2 0B  8B C8 A1 62 0C 2B 46 EC   PRP..+.. ...b.+F.
44B0:  8B DA 99 52 50 52 50 8B  F1 8B FB 9A 2E 2B F2 0B   ...RPRP. .....+..
44C0:  03 F0 13 FA 57 56 9A 34  01 56 08 83 C4 04 8E 06   ....WV.4 .V......
44D0:  1C 0B 26 A3 92 89 26 83  3E 92 89 14 7C 03 E9 05   ..&...&. >...|...
44E0:  00 26 FF 06 9C 89 8E 06  1C 0B 26 83 3E 90 89 14   .&...... ..&.>...
44F0:  7C 03 E9 10 00 26 83 3E  9C 89 00 7F 03 E9 05 00   |....&.> ........
4500:  26 FF 06 9C 89 8E 06 1C  0B 26 A1 9C 89 E9 00 00   &....... .&......
4510:  5E 5F 8B E5 5D CB 55 8B  EC 81 EC 34 00 57 56 C7   ^_..].U. ...4.WV.
4520:  46 F2 01 00 8E 06 1C 0B  26 C7 06 94 89 00 00 26   F....... &......&
4530:  C7 06 8E 89 00 00 C7 46  D2 00 00 E9 03 00 FF 46   .......F .......F
4540:  D2 8E 06 2C 0B 8B 46 D2  26 39 06 8E 00 7F 03 E9   ...,..F. &9......
4550:  49 0A 8B 5E D2 D1 E3 26  8B 87 B4 00 89 46 E6 83   I..^...& .....F..
4560:  7E E6 FF 75 03 E9 30 0A  FF 76 E6 B8 44 02 B9 AE   ~..u..0. .v..D...
4570:  0E 51 50 9A 02 00 87 08  83 C4 06 89 46 E6 83 7E   .QP..... ....F..~
4580:  E6 FF 75 03 E9 0E 0A B8  1A 00 F7 6E E6 8B D8 8E   ..u..... ...n....
4590:  06 2C 0B 26 8B 87 4E 02  89 46 EC B8 1A 00 F7 6E   .,.&..N. .F.....n
45A0:  E6 8B D8 26 8B 87 52 02  89 46 E0 83 7E E0 1E 7E   ...&..R. .F..~..~
45B0:  03 E9 03 00 E9 A8 FF 8E  06 2E 0B 26 83 3E 9E 01   ........ ...&.>..
45C0:  00 75 03 E9 3C 00 8E 06  1C 0B 26 83 3E BC 89 00   .u..<... ..&.>...
45D0:  74 03 E9 2D 00 B8 1A 00  F7 6E EC 8B D8 8E 06 2C   t..-.... .n.....,
45E0:  0B 26 F6 87 5C 02 80 75  03 E9 13 00 B8 1A 00 F7   .&..\..u ........
45F0:  6E E6 8B D8 26 F6 87 5C  02 80 74 03 E9 03 00 E9   n...&..\ ..t.....
4600:  5D FF B8 1A 00 F7 6E EC  8B D8 8E 06 2C 0B 8B 46   ].....n. ....,..F
4610:  E6 26 39 87 4E 02 74 03  E9 06 00 B8 01 00 E9 22   .&9.N.t. ......."
4620:  00 B8 1A 00 F7 6E EC 8B  D8 8E 06 2C 0B 8B 46 E6   .....n.. ...,..F.
4630:  26 39 87 48 02 74 03 E9  06 00 B8 00 00 E9 03 00   &9.H.t.. ........
4640:  B8 02 00 89 46 E4 83 7E  F2 00 75 03 E9 1B 01 B8   ....F..~ ..u.....
4650:  00 00 89 46 DE 89 46 DC  B8 1A 00 F7 6E EC 8B D8   ...F..F. ....n...
4660:  8E 06 2C 0B 26 F6 87 5C  02 01 74 03 E9 18 00 B8   ..,.&..\ ..t.....
4670:  1A 00 F7 6E E6 8B D8 26  F6 87 5C 02 01 74 03 E9   ...n...& ..\..t..
4680:  05 00 C7 46 DC 01 00 B8  1A 00 F7 6E E6 8B D8 8E   ...F.... ...n....
4690:  06 2C 0B B8 1A 00 F7 6E  EC 8B F0 26 8B 84 46 02   .,.....n ...&..F.
```

```
46A0:  26 2B 87 46 02 99 52 50  52 50 9A 2E 2B F2 0B 8B   &+.F..RP RP..+...
46B0:  C8 B8 1A 00 8B DA F7 6E  E6 8B F0 8E 06 2C 0B B8   .......n .....,..
46C0:  1A 00 F7 6E EC 8B F8 26  8B 85 44 02 26 2B 84 44   ...n...& ..D.&+.D
46D0:  02 99 52 50 52 50 8B F1  8B FB 9A 2E 2B F2 0B 03   ..RPRP.. ....+...
46E0:  F0 13 FA 57 56 9A 34 01  56 08 83 C4 04 89 46 FE   ...WV.4. V.....F.
46F0:  83 7E DC 00 74 03 E9 71  00 B8 1A 00 8E 06 1E 0B   .~..t..q ........
4700:  26 F7 2E 44 66 8B D8 8E  06 30 0B 8B 46 EC 26 89   &..Df... .0..F.&.
4710:  87 DC 72 B8 1A 00 8E 06  1E 0B 26 F7 2E 44 66 8B   ..r..... ..&..Df.
4720:  D8 8E 06 30 0B 8B 46 E6  26 89 87 DE 72 B8 1A 00   ...0..F. &...r...
4730:  8E 06 1E 0B 26 F7 2E 44  66 8B D8 8E 06 30 0B 8B   ....&..D f....0..
4740:  46 E4 26 89 87 E2 72 8E  06 1E 0B 26 FF 06 44 66   F.&...r. ...&..Df
4750:  26 81 3E 44 66 C8 00 7D  03 E9 05 00 C7 46 F2 00   &.>Df..} .....F..
4760:  00 8E 06 20 0B 26 FF 06  B2 F1 C7 46 D8 00 00 E9   ... .&.. ...F....
4770:  03 00 FF 46 D8 8E 06 2A  0B 8B 46 D8 26 39 06 E6   ...F...* ..F.&9..
4780:  89 7F 03 E9 DB 07 8B 5E  D8 8B C3 D1 E3 03 D8 D1   .......^ ........
4790:  E3 26 8B 87 DE DC 89 46  FA B8 1A 00 F7 6E FA 8B   .&.....F .....n..
47A0:  D8 26 8B 87 9A 8B 8B C8  B8 1A 00 F7 6E EC 8B D8   .&...... ....n...
47B0:  8E 06 2C 0B 26 2B 8F 44  02 89 4E EE 8E 06 26 0B   ..,.&+.D ..N...&.
47C0:  26 A1 8A 00 F7 D8 3B 46  EE 7D 03 E9 03 00 E9 A1   &.....;F .}......
47D0:  FF 8E 06 26 0B 8B 46 EE  26 39 06 8A 00 7E 03 E9   ...&..F. &9...~..
47E0:  03 00 E9 7C 07 B8 1A 00  F7 6E FA 8B D8 8E 06 2A   ...|.... .n.....*
47F0:  0B 26 8B 87 9C 8B 8B C8  B8 1A 00 F7 6E EC 8B D8   .&...... ....n...
4800:  8E 06 2C 0B 26 2B 8F 46  02 89 4E E8 FF 76 E8 9A   ..,.&+.F ..N..v..
4810:  1E 2A F2 0B 83 C4 02 8E  06 28 0B 26 3B 06 8C 00   .*...... .(.&;...
4820:  7D 03 E9 03 00 E9 4A FF  C7 46 D0 01 00 C7 46 F8   }.....J. .F....F.
4830:  00 00 C7 46 D6 00 00 C7  46 D4 00 00 E9 03 00 FF   ...F.... F.......
4840:  46 D4 83 7E D4 03 7C 03  E9 13 07 B8 1A 00 F7 6E   F..~..|. .......n
4850:  FA 8B D8 8B 46 D4 8B C8  D1 E0 03 C1 D1 E0 03 D8   ....F... ........
4860:  8E 06 2A 0B 26 8B 87 9E  8B 89 46 F4 83 7E F4 FF   ..*.&... ..F..~..
4870:  74 03 E9 03 00 E9 C7 FF  B8 1A 00 F7 6E F4 8B D8   t....... ....n...
4880:  8E 06 2A 0B 26 8B 87 9A  8B 8B C8 B8 1A 00 F7 6E   ..*.&... .......n
4890:  E6 8B D8 8E 06 2C 0B 26  2B 8F 44 02 89 4E EA FF   .....,.& +.D..N..
48A0:  76 EA 9A 1E 2A F2 0B 83  C4 02 8E 06 26 0B 26 3B   v...*... ....&.&;
48B0:  06 8A 00 7D 03 E9 03 00  E9 84 FF B8 1A 00 F7 6E   ...}.... .......n
48C0:  F4 8B D8 8E 06 2A 0B 26  8B 87 9C 8B 8B C8 B8 1A   .....*.& ........
48D0:  00 F7 6E E6 8B D8 8E 06  2C 0B 26 2B 8F 46 02 89   ..n..... ,.&+.F..
48E0:  4E E2 FF 76 E2 9A 1E 2A  F2 0B 83 C4 02 8E 06 28   N..v...* .......(
48F0:  0B 26 3B 06 8C 00 7D 03  E9 03 00 E9 41 FF B8 1A   .&;...}. ....A...
4900:  00 F7 6E FA 8B D8 8B 46  D4 8B C8 D1 E0 03 C1 D1   ..n....F ........
4910:  E0 03 D8 8E 06 2A 0B 26  83 BF A2 8B 1E 7C 03 E9   .....*.& .....|..
4920:  06 00 B8 01 00 E9 03 00  B8 00 00 50 9A 1E 2A F2   ........ ...P..*.
4930:  0B 83 C4 02 3D 00 00 75  03 E9 03 00 E9 00 FF C7   ....=..u ........
4940:  46 F8 00 00 B8 1A 00 F7  6E F4 8B D8 8E 06 2A 0B   F....... n.....*.
4950:  B8 1A 00 F7 6E FA 8B F0  26 8B 84 9A 8B 26 2B 87   ....n... &....&+.
4960:  9A 8B 99 52 50 52 50 9A  2E 2B F2 0B 8B C8 B8 1A   ...RPRP. .+......
4970:  00 8B DA F7 6E F4 8B F0  8E 06 2A 0B B8 1A 00 F7   ....n... ..*.....
4980:  6E FA 8B F8 26 8B 85 9C  8B 26 2B 84 9C 8B 99 52   n...&... .&+....R
4990:  50 52 50 8B F1 8B FB 9A  2E 2B F2 0B 03 F0 13 FA   PRP..... .+......
49A0:  57 56 9A 34 01 56 08 83  C4 04 89 46 CE 8B 46 CE   WV.4.V.. ...F..F.
49B0:  2B 46 FE 50 9A 1E 2A F2  0B 83 C4 02 89 46 CC B8   +F.P..*. .....F..
49C0:  14 00 F7 6E FE B9 64 00  99 F7 F9 3B 46 CC 7C 03   ...n..d. ...;F.|.
49D0:  E9 2F 00 B8 1A 00 F7 6E  EC 8B D8 8E 06 2C 0B 26   ./.....n .....,.&
49E0:  F6 87 5C 02 01 75 03 E9  18 00 B8 1A 00 F7 6E E6   ..\..u.. ......n.
49F0:  8B D8 26 F6 87 5C 02 01  75 03 E9 05 00 C7 46 D0   ..&..\.. u.....F.
```

```
4A00:  00 00 B8 1A 00 F7 6E FA  8B D8 8B 46 D4 8B C8 D1   ......n. ...F....
4A10:  E0 03 C1 D1 E0 03 D8 8E  06 2A 0B 26 8B 87 A2 8B   ........ .*.&....
4A20:  2B 46 E0 50 9A 1E 2A F2  0B 83 C4 02 8B 4E EE 2B   +F.P..*. .....N.+
4A30:  4E EA 51 8B F0 9A 1E 2A  F2 0B 83 C4 02 8B 4E E8   N.Q....* ......N.
4A40:  2B 4E E2 51 8B F8 9A 1E  2A F2 0B 83 C4 02 03 F8   +N.Q.... *.......
4A50:  03 F7 83 FE 3C 7F 03 E9  03 00 E9 E2 FD B8 1A 00   ....<... ........
4A60:  F7 6E F4 8B D8 8E 06 2A  0B 8B 46 FA 26 39 87 A4   .n.....* ..F.&9..
4A70:  8B 74 03 E9 06 00 B8 01  00 E9 22 00 B8 1A 00 F7   .t...... ..".....
4A80:  6E F4 8B D8 8E 06 2A 0B  8B 46 FA 26 39 87 9E 8B   n.....*. .F.&9...
4A90:  74 03 E9 06 00 B8 00 00  E9 03 00 B8 02 00 89 46   t....... .......F
4AA0:  F0 B8 1A 00 F7 6E F4 8B  5E F0 8B CB D1 E3 03 D9   .....n.. ^.......
4AB0:  D1 E3 03 D8 8E 06 2A 0B  26 8B 87 A0 8B 8B C8 B8   ......*. &.......
4AC0:  1A 00 F7 6E E6 8B D8 8E  06 2C 0B 26 2B 8F 50 02   ...n.... .,.&+.P.
4AD0:  89 4E F6 81 7E F6 B4 00  7F 03 E9 08 00 81 6E F6   .N..~... ......n.
4AE0:  68 01 E9 12 00 81 7E F6  4C FF 7D 03 E9 03 00 E9   h.....~. L.}.....
4AF0:  05 00 81 46 F6 68 01 B8  1A 00 F7 6E FA 8B D8 8B   ...F.h.. ...n....
4B00:  46 D4 8B C8 D1 E0 03 C1  D1 E0 03 D8 8E 06 2A 0B   F....... ......*.
4B10:  26 8B 87 A0 8B 8B C8 B8  1A 00 F7 6E EC 8B 5E E4   &....... ...n..^.
4B20:  8B D3 D1 E3 03 DA D1 E3  03 D8 8E 06 2C 0B 26 2B   ........ ....,.&+
4B30:  8F 4A 02 89 4E FC 81 7E  FC B4 00 7F 03 E9 08 00   .J..N..~ ........
4B40:  81 6E FC 68 01 E9 12 00  81 7E FC 4C FF 7D 03 E9   .n.h.... .~.L.}..
4B50:  03 00 E9 05 00 81 46 FC  68 01 FF 76 FC 9A 1E 2A   ......F. h..v...*
4B60:  F2 0B 83 C4 02 3D 12 00  7F 03 E9 03 00 E9 CF FC   .....=.. ........
4B70:  FF 76 F6 9A 1E 2A F2 0B  83 C4 02 3D 12 00 7F 03   .v...*.. ...=....
4B80:  E9 05 00 C7 46 D0 00 00  B8 1A 00 F7 6E E6 8B D8   ....F... ....n...
4B90:  8E 06 2C 0B 26 FF B7 46  02 B8 1A 00 F7 6E E6 8B   ..,.&..F .....n..
4BA0:  D8 26 FF B7 44 02 B8 1A  00 F7 6E EC 8B D8 26 FF   .&..D... ..n...&.
4BB0:  B7 46 02 B8 1A 00 F7 6E  EC 8B D8 26 FF B7 44 02   .F.....n ...&..D.
4BC0:  B8 1A 00 F7 6E F4 8B D8  8E 06 2A 0B 26 FF B7 9C   ....n... ..*.&...
4BD0:  8B B8 1A 00 F7 6E F4 8B  D8 26 FF B7 9A 8B B8 1A   .....n.. .&......
4BE0:  00 F7 6E FA 8B D8 26 FF  B7 9C 8B B8 1A 00 F7 6E   ..n...&. .......n
4BF0:  FA 8B D8 26 FF B7 9A 8B  9A 84 01 87 08 83 C4 10   ...&.... ........
4C00:  89 46 DA FF 76 DA 9A 1E  2A F2 0B 83 C4 02 3D 12   .F..v... *.....=.
4C10:  00 7F 03 E9 03 00 E9 26  FC 8B 46 F6 2B 46 FC 50   .......& ..F.+F.P
4C20:  9A 1E 2A F2 0B 83 C4 02  3D 12 00 7F 03 E9 05 00   ..*..... =.......
4C30:  C7 46 D0 00 00 B8 1A 00  F7 6E EC 8B D8 8E 06 2C   .F...... .n.....,
4C40:  0B 26 F6 87 5C 02 10 75  03 E9 1B 00 B8 1A 00 F7   .&..\..u ........
4C50:  6E EC 8B D8 26 F6 87 5C  02 01 75 03 E9 08 00 C7   n...&..\ ..u.....
4C60:  46 F8 02 00 E9 05 00 C7  46 F8 01 00 83 7E D0 00   F....... F....~..
4C70:  74 03 E9 03 00 FF 4E F8  83 7E F8 00 7F 03 E9 77   t.....N. .~.....w
4C80:  00 8B 46 F8 8E 06 32 0B  8B 5E FC D1 E3 26 01 87   ..F...2. .^...&..
4C90:  EC 88 8B 46 E8 99 F7 3E  34 01 8E 06 24 0B 26 03   ...F...> 4...$.&.
4CA0:  06 90 F0 8B C8 D1 E0 D1  E0 03 C1 D1 E0 05 05 00   ........ ........
4CB0:  B9 0A 00 99 F7 F9 BB 3C  00 F7 EB 8B D8 8B 46 EE   .......< ......F.
4CC0:  99 F7 3E 34 01 8E 06 22  0B 26 03 06 06 F0 8B D0   ..>4..." .&......
4CD0:  D1 E0 D1 E0 03 C2 D1 E0  05 05 00 99 F7 F9 03 D8   ........ ........
4CE0:  8E 06 34 0B 8A 46 F8 26  00 87 00 00 8B 46 F8 8E   ..4..F.& .....F..
4CF0:  06 1C 0B 26 01 06 8E 89  83 7E D0 00 75 03 E9 A2   ...&.... .~..u...
4D00:  00 B8 1A 00 F7 6E E6 8B  D8 8E 06 2C 0B 26 F6 87   .....n.. ...,.&..
4D10:  5C 02 10 75 03 E9 1B 00  B8 1A 00 F7 6E E6 8B D8   \..u.... ....n...
4D20:  26 F6 87 5C 02 01 75 03  E9 08 00 C7 46 F8 02 00   &..\..u. ....F...
4D30:  E9 05 00 C7 46 F8 01 00  83 7E DE 00 74 03 E9 0E   ....F... .~..t...
4D40:  00 8E 06 1C 0B 26 FF 06  94 89 C7 46 DE 01 00 8B   .....&.. ...F....
4D50:  46 F8 8E 06 32 0B 8B 5E  F6 D1 E3 26 01 87 EC 88   F...2..^ ...&....
```

```
4D60:  8B 46 E2 99 F7 3E 34 01  8E 06 24 0B 26 03 06 90   .F...>4. ..$.&...
4D70:  F0 B9 3C 00 F7 E9 8B D8  8B 46 EA 99 F7 3E 34 01   ..<..... .F...>4.
4D80:  03 D8 8E 06 22 0B 26 03  1E 06 F0 8E 06 34 0B 8A   ....".&. .....4..
4D90:  46 F8 26 00 87 00 00 8B  46 F8 8E 06 1C 0B 26 01   F.&..... F.....&.
4DA0:  06 8E 89 83 7E F2 00 75  03 E9 AF 01 83 7E D0 00   ....¯..u .....¯..
4DB0:  75 03 E9 A6 01 83 7E DC  00 74 03 E9 9D 01 B8 1A   u.....¯. .t......
4DC0:  00 8E 06 1E 0B 26 F7 2E  44 66 8B D8 8E 06 30 0B   .....&.. Df....0.
4DD0:  8B 46 FA 26 89 87 DC 72  B8 1A 00 8E 06 1E 0B 26   .F.&...r .......&
4DE0:  F7 2E 44 66 8B D8 8E 06  30 0B 8B 46 F4 26 89 87   ..Df.... 0..F.&..
4DF0:  DE 72 B8 1A 00 8E 06 1E  0B 26 F7 2E 44 66 8B D8   .r...... .&..Df..
4E00:  8E 06 30 0B 8B 46 DA 26  89 87 F0 72 B8 1A 00 8E   ..0..F.& ...r....
4E10:  06 1E 0B 26 F7 2E 44 66  8B D8 8E 06 30 0B 8B 46   ...&..Df ....0..F
4E20:  EE 26 89 87 E4 72 B8 1A  00 8E 06 1E 0B 26 F7 2E   .&...r.. .....&..
4E30:  44 66 8B D8 8E 06 30 0B  8B 46 EA 26 89 87 E6 72   Df....0. .F.&...r
4E40:  B8 1A 00 8E 06 1E 0B 26  F7 2E 44 66 8B D8 8E 06   .......& ..Df....
4E50:  30 0B 8B 46 E8 26 89 87  E8 72 B8 1A 00 8E 06 1E   0..F.&.. .r......
4E60:  0B 26 F7 2E 44 66 8B D8  8E 06 30 0B 8B 46 CE 26   .&..Df.. ..0..F.&
4E70:  89 87 F4 72 B8 1A 00 8E  06 1E 0B 26 F7 2E 44 66   ...r.... ...&..Df
4E80:  8B D8 8E 06 30 0B 8B 46  CC 26 89 87 F2 72 B8 1A   ....0..F .&...r..
4E90:  00 8E 06 1E 0B 26 F7 2E  44 66 8B D8 8E 06 30 0B   .....&.. Df....0.
4EA0:  8B 46 E2 26 89 87 EA 72  B8 1A 00 8E 06 1E 0B 26   .F.&...r .......&
4EB0:  F7 2E 44 66 8B D8 8E 06  30 0B 8B 46 FC 26 89 87   ..Df.... 0..F.&..
4EC0:  EC 72 B8 1A 00 8E 06 1E  0B 26 F7 2E 44 66 8B D8   .r...... .&..Df..
4ED0:  8E 06 30 0B 8B 46 F6 26  89 87 EE 72 83 7E F0 01   ..0..F.& ...r.¯..
4EE0:  74 03 E9 29 00 B8 1A 00  8E 06 1E 0B 26 F7 2E 44   t..).... ....&..D
4EF0:  66 8B D8 8E 06 30 0B B8  FF FF 2B 46 D4 26 89 87   f....0.. ..+F.&..
4F00:  E2 72 8E 06 1E 0B 26 FF  06 44 66 E9 23 00 B8 1A   .r....&. .Df.#...
4F10:  00 8E 06 1E 0B 26 F7 2E  44 66 8B D8 8E 06 30 0B   .....&.. Df....0.
4F20:  8B 46 F0 26 89 87 E2 72  8E 06 1E 0B 26 FF 06 44   .F.&...r ....&..D
4F30:  66 8E 06 1E 0B 26 81 3E  44 66 C8 00 7D 03 E9 1A   f....&.> Df..}...
4F40:  00 C7 46 F2 00 00 B8 1A  00 26 F7 2E 44 66 8B D8   ..F..... .&..Df..
4F50:  8E 06 30 0B 26 C7 87 DC  72 FF FF E9 E1 F8 E9 11   ..0.&... r.......
4F60:  F8 83 7E F2 00 75 03 E9  2B 00 83 7E DC 00 74 03   ..¯..u.. +..¯..t.
4F70:  E9 22 00 B8 1A 00 8E 06  1E 0B 26 F7 2E 44 66 8B   .("...... ..&..Df.
4F80:  D8 8E 06 30 0B 26 C7 87  DC 72 FF FF 8E 06 1E 0B   ...0.&.. .r......
4F90:  26 FF 06 44 66 E9 C7 F5  E9 A3 F5 5E 5F 8B E5 5D   &..Df... ...^_..]
4FA0:  CB 55 8B EC 81 EC 12 00  57 56 C4 5E 0E 26 C7 07   .U...... WV.^.&..
4FB0:  00 00 C7 46 F8 00 00 8B  46 0A D1 F8 89 46 FC 8B   ...F.... F....F..
4FC0:  46 12 D1 E0 89 46 F6 8B  46 FC 2B 46 12 2B 46 0C   F....F.. F.+F.+F.
4FD0:  3D 00 00 7C 03 E9 03 00  B8 00 00 89 46 F2 8B 46   =..|.... ....F..F
4FE0:  F6 03 46 F2 3B 46 0A 7F  03 E9 03 00 8B 46 0A 89   ..F.;F.. .....F..
4FF0:  46 FA 8B 46 F2 89 46 EE  E9 03 00 FF 46 EE 8B 46   F..F..F. ....F..F
5000:  EE 39 46 FA 7F 03 E9 11  00 8B 5E EE D1 E3 C4 76   .9F..... ..^....v
5010:  06 26 8B 00 01 46 F8 E9  E1 FF 8B 46 12 01 46 F2   .&...F.. ...F..F.
5020:  8B 46 FC 03 46 0C 8B 4E  0A 2B 4E 12 3B C1 7F 03   .F..F..N .+N.;...
5030:  E9 02 00 8B C1 89 46 FA  8B 46 F2 89 46 F0 E9 03   ......F. .F..F...
5040:  00 FF 46 F0 8B 46 F0 39  46 FA 7F 03 E9 74 00 8B   ..F..F.9 F....t..
5050:  5E F0 2B 5E 12 D1 E3 C4  76 06 26 8B 00 8B 5E F0   ^.+^.... v.&...^.
5060:  03 5E 12 D1 E3 C4 76 06  26 2B 00 F7 D8 01 46 F8   .^....v. &+....F.
5070:  C4 5E 0E 8B 46 F8 26 39  07 7C 03 E9 15 00 8B 46   .^..F.&9 .|.....F
5080:  F8 C4 5E 0E 26 89 07 8B  46 F0 89 46 FE 89 46 F4   ..^.&... F..F..F.
5090:  E9 2D 00 C4 5E 0E 8B 46  F8 26 39 07 74 03 E9 1A   .-..^..F .&9.t...
50A0:  00 83 7E F4 00 75 03 E9  11 00 8B 46 F4 03 46 F0   ..¯..u.. ...F..F.
50B0:  99 2B C2 D1 F8 89 46 FE  E9 05 00 C7 46 F4 00 00   .+....F. ....F...
```

```
50C0:  E9 7E FF 8B 46 FC 29 46  FE 8B 46 FE E9 00 00 5E   .~..F.)F ..F....^
50D0:  5F 8B E5 5D CB 55 8B EC  81 EC 00 00 57 56 B8 10   _..].U.. ....WV..
50E0:  0E 50 B8 00 00 50 B9 00  00 BA 51 1E 52 51 9A 72   .P...P.. ..Q.RQ.r
50F0:  29 F2 0B 83 C4 08 B8 40  01 50 B8 00 00 50 B8 4C   )......@ .P...P.L
5100:  88 B9 AE 0E 51 50 9A 72  29 F2 0B 83 C4 08 5E 5F   ....QP.r ).....^_
5110:  8B E5 5D CB 55 8B EC 81  EC 5E 00 57 56 C7 46 D8   ..].U... .^.WV.F.
5120:  00 00 C7 46 FC AC 0D C7  46 D6 32 00 8B 46 D6 99   ...F.... F.2..F..
5130:  89 46 AC 89 56 AE C7 46  B4 14 00 B8 FF FF 89 46   .F..V..F .......F
5140:  A4 89 46 B2 B8 00 00 BA  00 00 89 46 D0 89 56 D2   ..F..... ...F..V.
5150:  89 46 CC 89 56 CE 89 46  C2 89 56 C4 89 46 BE 89   .F..V..F ..V..F..
5160:  56 C0 C7 46 BA 01 00 E9  03 00 FF 46 BA 8E 06 20   V..F.... ...F...
5170:  0B 8B 46 BA 26 39 06 B2  F1 7F 03 E9 AE 05 8B 46   ..F.&9.. .......F
5180:  D8 89 46 DC C7 46 F8 FF  FF B8 1A 00 F7 6E D8 8B   ..F..F.. .....n..
5190:  D8 8E 06 30 0B 26 8B 87  DC 72 89 46 EC B8 1A 00   ...0.&.. .r.F....
51A0:  F7 6E D8 8B D8 26 8B 87  DE 72 89 46 E2 FF 46 D8   .n...&.. .r.F..F.
51B0:  8B 46 D6 99 89 46 A6 89  56 A8 B8 1A 00 F7 6E D8   .F...F.. V.....n.
51C0:  8B D8 8E 06 30 0B 26 83  BF DC 72 FF 75 03 E9 7B   ....0.&. ..r.u..{
51D0:  03 C7 46 CA 00 00 B8 1A  00 F7 6E D8 8B D8 26 8B   ..F..... ..n...&.
51E0:  87 DC 72 89 46 FA B8 1A  00 F7 6E D8 8B D8 26 8B   ..r.F... ..n...&.
51F0:  87 DE 72 89 46 F4 B8 1A  00 F7 6E D8 8B D8 26 C7   ..r.F... ..n...&.
5200:  87 E0 72 01 00 B8 1A 00  F7 6E D8 8B D8 26 8B 87   ..r..... .n...&..
5210:  EC 72 2B 06 5E 0C 89 46  B0 B8 1A 00 F7 6E D8 8B   .r+.^..F .....n..
5220:  D8 26 8B 87 EE 72 2B 06  5E 0C 89 46 AA B8 1A 00   .&...r+. ^..F....
5230:  F7 6E D8 8B D8 26 8B 87  E4 72 2B 06 60 0C 89 46   .n...&.. .r+.`..F
5240:  EE B8 1A 00 F7 6E D8 8B  D8 26 8B 87 E6 72 2B 06   .....n.. .&...r+.
5250:  60 0C 89 46 E6 B8 1A 00  F7 6E D8 8B D8 26 8B 87   `..F.... .n...&..
5260:  E8 72 2B 06 62 0C 89 46  E4 B8 1A 00 F7 6E D8 8B   .r+.b..F .....n..
5270:  D8 26 8B 87 EA 72 2B 06  62 0C 89 46 DA B8 1A 00   .&...r+. b..F....
5280:  F7 6E D8 8B D8 26 8B 87  F0 72 2B 06 5E 0C 89 46   .n...&.. .r+.^..F
5290:  C6 B8 1A 00 F7 6E D8 8B  D8 26 8B 87 F4 72 89 46   .....n.. .&...r.F
52A0:  A2 B8 1A 00 F7 6E D8 8B  D8 26 8B 87 F2 72 89 46   .....n.. .&...r.F
52B0:  BC FF 46 D8 B8 1A 00 F7  6E EC 8B D8 8E 06 2C 0B   ..F..... n.....,.
52C0:  26 F6 87 5C 02 01 75 03  E9 13 00 FF 76 B0 9A 1E   &..\..u. ....v...
52D0:  2A F2 0B 83 C4 02 3D 12  00 7E 03 E9 3D 00 B8 1A   *.....=. .~..=...
52E0:  00 F7 6E E2 8B D8 8E 06  2C 0B 26 F6 87 5C 02 01   ..n..... ,.&..\..
52F0:  75 03 E9 13 00 FF 76 AA  9A 1E 2A F2 0B 83 C4 02   u.....v. ..*.....
5300:  3D 12 00 7E 03 E9 13 00  FF 76 C6 9A 1E 2A F2 0B   =..~.... .v...*..
5310:  83 C4 02 3D 12 00 7F 03  E9 03 00 E9 9C FE FF 76   ...=.... .......v
5320:  EE 9A 1E 2A F2 0B 83 C4  02 3D 2D 00 7E 03 E9 13   ...*.... .=-.~...
5330:  00 FF 76 E4 9A 1E 2A F2  0B 83 C4 02 3D 2D 00 7F   ..v...*. ....=-..
5340:  03 E9 03 00 E9 73 FE B8  1A 00 F7 6E EC 8B D8 8E   .....s.. ...n....
5350:  06 2C 0B 26 F6 87 5C 02  08 75 03 E9 17 00 B8 1A   .,.&..\. .u......
5360:  00 F7 6E FA 8B D8 8E 06  2A 0B 26 F6 87 B2 8B 08   ..n..... *.&.....
5370:  75 03 E9 8A 00 B8 1A 00  F7 6E EC 8B D8 8E 06 2C   u....... .n.....,
5380:  0B 26 F6 87 5C 02 08 74  03 E9 17 00 B8 1A 00 F7   .&..\..t ........
5390:  6E FA 8B D8 8E 06 2A 0B  26 F6 87 B2 8B 08 74 03   n.....*. &.....t.
53A0:  E9 5C 00 B8 1A 00 F7 6E  E2 8B D8 8E 06 2C 0B 26   .\.....n .....,.&
53B0:  F6 87 5C 02 08 75 03 E9  17 00 B8 1A 00 F7 6E F4   ..\..u.. ......n.
53C0:  8B D8 8E 06 2A 0B 26 F6  87 B2 8B 08 75 03 E9 2E   ....*.&. ....u...
53D0:  00 B8 1A 00 F7 6E E2 8B  D8 8E 06 2C 0B 26 F6 87   .....n.. ...,.&..
53E0:  5C 02 08 74 03 E9 1A 00  B8 1A 00 F7 6E F4 8B D8   \..t.... ....n...
53F0:  8E 06 2A 0B 26 F6 87 B2  8B 08 75 03 E9 03 00 FF   ..*.&... ..u.....
5400:  46 CA FF 76 E6 9A 1E 2A  F2 0B 83 C4 02 3D 2D 00   F..v...* .....=-.
5410:  7E 03 E9 13 00 FF 76 DA  9A 1E 2A F2 0B 83 C4 02   ~.....v. ..*.....
```

```
5420:  3D 2D 00 7F 03 E9 03 00  E9 8F FD 8B 46 E6 8B C8   =-...... ....F...
5430:  F7 E9 8B C8 8B 46 DA 8B  D8 F7 EB 03 C8 8B 46 BC   .....F.. ......F.
5440:  8B D8 F7 EB 03 C1 8B C8  8B 46 C6 8B D8 F7 EB 03   ........ .F......
5450:  C1 8B C8 8B 46 AA 8B D8  F7 EB 03 C1 8B C8 8B 46   ....F... .......F
5460:  B0 8B D8 F7 EB 03 C1 8B  C8 8B 46 E4 8B D8 F7 EB   ........ ..F.....
5470:  03 C1 8B C8 8B 46 EE 8B  D8 F7 EB 03 C1 99 89 46   .....F.. .......F
5480:  E8 89 56 EA 8B 46 A2 99  52 50 FF 76 EA FF 76 E8   ..V..F.. RP.v..v.
5490:  9A 94 2A F2 0B 89 46 B6  89 56 B8 8B 46 FC 99 3B   ..*...F. .V..F..;
54A0:  56 EA 7D 03 E9 A2 00 7E  03 E9 08 00 3B 46 E8 77   V.}....~ ....;F.w
54B0:  03 E9 95 00 83 7E EA 00  7D 03 E9 8C 00 7E 03 E9   .....~.. }....~..
54C0:  09 00 83 7E E8 00 77 03  E9 7E 00 8B 46 B6 8B 56   ...~..w. .~..F..V
54D0:  B8 39 56 A8 7D 03 E9 20  00 7E 03 E9 08 00 39 46   .9V.}..  .~....9F
54E0:  A6 77 03 E9 13 00 8B 46  B6 8B 56 B8 89 46 A6 89   .w.....F ..V..F..
54F0:  56 A8 8B 46 D8 48 89 46  F8 8B 46 B4 39 46 CA 7D   V..F.H.F ..F.9F.}
5500:  03 E9 26 00 8B 46 B4 39  46 CA 74 03 E9 3A 00 8B   ..&..F.9 F.t..:..
5510:  46 AC 8B 56 AE 39 56 B8  7E 03 E9 2C 00 7D 03 E9   F..V.9V. ~..,.}..
5520:  08 00 39 46 B6 72 03 E9  1F 00 8B 46 B6 8B 56 B8   ..9F.r.. ...F..V.
5530:  89 46 AC 89 56 AE 8B 46  DC 89 46 D4 8B 46 D8 48   .F..V..F ..F..F.H
5540:  89 46 C8 8B 46 CA 89 46  B4 E9 6E FC 83 7E F8 FF   .F..F..F ..n..~..
5550:  7F 03 E9 D1 01 C7 46 FE  FF FF B8 1A 00 F7 6E DC   ......F. ......n.
5560:  8B D8 8E 06 30 0B 26 8B  87 DC 72 89 46 EC B8 1A   ....0.&. ..r.F...
5570:  00 F7 6E DC 8B D8 26 8B  87 DE 72 89 46 E2 B8 1A   ..n...&. ..r.F...
5580:  00 F7 6E F8 8B D8 26 8B  87 DC 72 89 46 FA B8 1A   ..n...&. ..r.F...
5590:  00 F7 6E F8 8B D8 26 8B  87 DE 72 89 46 F4 B8 1A   ..n...&. ..r.F...
55A0:  00 F7 6E EC 8B D8 8E 06  2C 0B 26 F6 87 5C 02 01   ..n..... ,.&..\..
55B0:  75 03 E9 39 00 B8 1A 00  F7 6E EC 8B D8 26 F6 87   u..9.... .n...&..
55C0:  5C 02 10 75 03 E9 26 00  B8 1A 00 F7 6E FA 8B D8   \..u..&. ....n...
55D0:  8E 06 2A 0B 26 F6 87 B2  8B 01 75 03 E9 0F 00 8B   ..*.&... ..u.....
55E0:  46 FA 89 46 FE 8B 46 EC  89 46 F6 E9 4D 00 B8 1A   F..F..F. .F..M...
55F0:  00 F7 6E E2 8B D8 8E 06  2C 0B 26 F6 87 5C 02 01   ..n..... ,.&..\..
5600:  75 03 E9 36 00 B8 1A 00  F7 6E E2 8B D8 26 F6 87   u..6.... .n...&..
5610:  5C 02 10 75 03 E9 23 00  B8 1A 00 F7 6E F4 8B D8   \..u..#. ....n...
5620:  8E 06 2A 0B 26 F6 87 B2  8B 01 75 03 E9 0C 00 8B   ..*.&... ..u.....
5630:  46 F4 89 46 FE 8B 46 E2  89 46 F6 83 7E FE FF 7F   F..F..F. .F..~...
5640:  03 E9 E2 00 8E 06 1C 0B  26 FF 06 9A 89 83 7E B2   ........ &.....~.
5650:  FF 7F 03 E9 C4 00 B8 1A  00 F7 6E F6 8B D8 8E 06   ........ ..n.....
5660:  2C 0B 26 8B 87 44 02 8B  C8 B8 1A 00 F7 6E A4 8B   ,.&..D.. .....n..
5670:  D8 26 2B 8F 44 02 89 4E  DE B8 1A 00 F7 6E F6 8B   .&+.D..N .....n..
5680:  D8 26 8B 87 46 02 8B C8  B8 1A 00 F7 6E A4 8B D8   .&..F... ....n...
5690:  26 2B 8F 46 02 89 4E E0  B8 1A 00 F7 6E FE 8B D8   &+.F..N. ....n...
56A0:  8E 06 2A 0B 26 8B 87 9A  8B 8B C8 B8 1A 00 F7 6E   ..*.&... .......n
56B0:  B2 8B D8 26 2B 8F 9A 8B  89 4E F0 B8 1A 00 F7 6E   ...&+... .N.....n
56C0:  FE 8B D8 26 8B 87 9C 8B  8B C8 B8 1A 00 F7 6E B2   ...&.... ......n.
56D0:  8B D8 26 2B 8F 9C 8B 89  4E F2 8B 46 DE 2B 46 F0   ..&+.... N..F.+F.
56E0:  50 9A 1E 2A F2 0B 83 C4  02 99 01 46 BE 11 56 C0   P..*.... ...F..V.
56F0:  8B 46 E0 2B 46 F2 50 9A  1E 2A F2 0B 83 C4 02 99   .F.+F.P. .*......
5700:  01 46 C2 11 56 C4 8B 46  DE 99 01 46 CC 11 56 CE   .F..V..F ...F..V.
5710:  8B 46 E0 99 01 46 D0 11  56 D2 8B 46 FE 89 46 B2   .F...F.. V..F..F.
5720:  8B 46 F6 89 46 A4 FF 46  D8 E9 3E FA 8B 46 D6 99   .F..F..F ..>..F..
5730:  3B 56 AE 7D 03 E9 9C 00  7E 03 E9 08 00 3B 46 AC   ;V.}.... ~....;F.
5740:  77 03 E9 8F 00 B8 1A 00  F7 6E D4 8B D8 8E 06 30   w....... .n.....0
5750:  0B 26 8B 87 DC 72 C4 5E  06 26 89 07 B8 1A 00 F7   .&...r.^ .&......
5760:  6E D4 8B D8 8E 06 30 0B  26 8B 87 DE 72 C4 5E 0A   n.....0. &...r.^.
5770:  26 89 07 B8 1A 00 F7 6E  C8 8B D8 8E 06 30 0B 26   &......n .....0.&
```

```
5780:  8B 87 DC 72 C4 5E 0E 26  89 07 B8 1A 00 F7 6E C8   ...r.^.& ......n.
5790:  8B D8 8E 06 30 0B 26 8B  87 DE 72 C4 5E 12 26 89   ....0.&. ..r.^.&.
57A0:  07 8E 06 1C 0B 26 83 3E  9A 89 02 7F 03 E9 13 00   .....&.> ........
57B0:  8B 46 C2 03 46 BE 99 26  F7 3E 9A 89 26 A3 98 89   .F..F..& .>..&...
57C0:  E9 0B 00 8E 06 1C 0B 26  C7 06 98 89 64 00 B8 01   .......& ....d...
57D0:  00 E9 06 00 B8 00 00 E9  00 00 5E 5F 8B E5 5D CB   ........ ..^_..].
57E0:  55 8B EC 81 EC 02 00 57  56 B8 1A 00 F7 6E 08 8B   U......W V....n..
57F0:  D8 8E 06 2C 0B 26 FF B7  46 02 B8 1A 00 F7 6E 08   ...,.&.. F.....n.
5800:  8B D8 26 FF B7 44 02 B8  1A 00 F7 6E 06 8B D8 26   ..&..D.. ...n...&
5810:  FF B7 46 02 B8 1A 00 F7  6E 06 8B D8 26 FF B7 44   ..F..... n...&..D
5820:  02 B8 1A 00 F7 6E 0C 8B  D8 8E 06 2A 0B 26 FF B7   .....n.. ...*.&..
5830:  9C 8B B8 1A 00 F7 6E 0C  8B D8 26 FF B7 9A 8B B8   ......n. ..&.....
5840:  1A 00 F7 6E 0A 8B D8 26  FF B7 9C 8B B8 1A 00 F7   ...n...& ........
5850:  6E 0A 8B D8 26 FF B7 9A  8B 9A 84 01 87 08 83 C4   n...&... ........
5860:  10 89 46 FE B8 1A 00 F7  6E 0C 8B D8 8E 06 2A 0B   ..F..... n.....*.
5870:  26 FF B7 9C 8B B8 1A 00  F7 6E 0C 8B D8 26 FF B7   &....... .n...&..
5880:  9A 8B B8 1A 00 F7 6E 0A  8B D8 26 FF B7 9C 8B B8   ......n. ..&.....
5890:  1A 00 F7 6E 0A 8B D8 26  FF B7 9A 8B B8 1A 00 F7   ...n...& ........
58A0:  6E 08 8B D8 8E 06 2C 0B  26 FF B7 46 02 B8 1A 00   n.....,. &..F....
58B0:  F7 6E 08 8B D8 26 FF B7  44 02 B8 1A 00 F7 6E 06   .n...&.. D.....n.
58C0:  8B D8 26 FF B7 46 02 B8  1A 00 F7 6E 06 8B D8 26   ..&..F.. ...n...&
58D0:  FF B7 44 02 9A C9 02 87  08 83 C4 10 8B 46 FE 8E   ..D..... .....F..
58E0:  06 1C 0B 26 A3 9E 89 5E  5F 8B E5 5D CB 55 8B EC   ...&...^ _..].U..
58F0:  81 EC 12 00 57 56 8D 46  EE 16 50 8D 4E F0 16 51   ....WV.F ..P.N..Q
5900:  9A BF 05 33 0A 83 C4 08  8B 46 EE 89 46 FE C7 46   ...3.... .F..F..F
5910:  FC 00 00 C7 46 F4 00 00  E9 03 00 FF 46 F4 C4 5E   ....F... ....F..^
5920:  06 8B 46 F4 26 39 47 02  7F 03 E9 1E 01 8B 46 F4   ..F.&9G. ......F.
5930:  8B C8 D1 E0 03 C1 D1 E0  03 46 06 8B 56 08 05 F8   ........ .F..V...
5940:  52 52 50 8B 46 F4 8B C8  D1 E0 03 C1 D1 E0 03 46   RRP.F... .......F
5950:  06 8B 56 08 05 F6 52 52  50 9A EE 01 87 08 83 C4   ..V...RR P.......
5960:  08 8B 76 F4 8B C6 D1 E6  03 F0 D1 E6 C4 5E 06 26   ..v..... .....^.&
5970:  8B 80 F6 52 89 46 F8 8B  76 F4 8B C6 D1 E6 03 F0   ...R.F.. v.......
5980:  D1 E6 C4 5E 06 26 8B 80  F8 52 89 46 F6 8B 76 F4   ...^.&.. .R.F..v.
5990:  8B C6 D1 E6 03 F0 D1 E6  C4 5E 06 26 8B 80 FA 52   ........ .^.&...R
59A0:  89 46 FA B8 1A 00 F7 6E  FA 8B F0 C4 5E 06 8B 46   .F.....n ....^..F
59B0:  F8 26 89 80 B6 01 B8 1A  00 F7 6E FA 8B F0 C4 5E   .&...... ..n....^
59C0:  06 8B 46 F6 26 89 80 B8  01 8B 46 F6 39 46 FE 7F   ..F.&... ..F.9F..
59D0:  03 E9 06 00 8B 46 F6 89  46 FE 8B 46 F6 39 46 FC   .....F.. F..F.9F.
59E0:  7C 03 E9 06 00 8B 46 F6  89 46 FC C7 46 F2 00 00   |.....F. .F..F...
59F0:  E9 03 00 FF 46 F2 83 7E  F2 02 7E 03 E9 49 00 B8   ....F..~ ..~..I..
5A00:  1A 00 F7 6E FA 8B 76 F2  8B CE D1 E6 03 F1 D1 E6   ...n..v. ........
5A10:  03 F0 C4 5E 06 26 83 B8  BA 01 FF 75 03 E9 25 00   ...^.&.. ...u..%.
5A20:  8E 06 1C 0B 26 A1 9E 89  8B C8 B8 1A 00 F7 6E FA   ....&... ......n.
5A30:  8B 76 F2 8B D6 D1 E6 03  F2 D1 E6 03 F0 C4 5E 06   .v...... ......^.
5A40:  26 01 88 BC 01 E9 AB FF  E9 D0 FE 8B 46 0A 8B 56   &....... ....F..V
5A50:  0C 05 12 00 52 50 8B 46  0A 8B 56 0C 05 10 00 52   ....RP.F ..V....R
5A60:  50 9A EE 01 87 08 83 C4  08 8B 46 FE C4 5E 0A 26   P....... ..F..^.&
5A70:  89 47 14 8B 46 FC C4 5E  0A 26 89 47 16 5E 5F 8B   .G..F..^ .&.G.^_.
5A80:  E5 5D CB 55 8B EC 81 EC  20 00 57 56 B8 00 00 C4   .].U....  .WV....
5A90:  5E 0A 26 89 47 08 C4 5E  0A 26 89 47 02 C4 5E 0A   ^.&.G..^ .&.G..^.
5AA0:  26 89 47 06 C4 5E 0A 26  89 47 04 C4 5E 0A 26 C7   &.G..^.& .G..^.&.
5AB0:  47 0A 00 00 B8 00 00 89  46 E0 99 89 46 F0 89 56   G....... F...F..V
5AC0:  F2 B8 00 00 BA 00 00 89  46 E2 89 56 E4 89 46 E8   ........ F..V..F.
5AD0:  89 56 EA 8D 46 E6 16 50  8D 4E EC 16 51 9A BF 05   .V..F..P .N..Q...
```

```
5AE0:  33 0A 83 C4 08 8B 46 E6  89 46 FE C7 46 FC 00 00   3.....F. .F..F...
5AF0:  C7 46 EE 00 00 E9 03 00  FF 46 EE C4 5E 06 8B 46   .F...... .F..^..F
5B00:  EE 26 39 07 7F 03 E9 3D  02 8B 76 EE D1 E6 C4 5E   .&9....= ..v....^
5B10:  06 26 8B 40 26 89 46 F8  83 7E F8 FF 75 03 E9 22   .&.@&.F. .~..u.."
5B20:  02 B8 1A 00 F7 6E F8 8B  F0 C4 5E 06 26 83 A0 CE   .....n.. ..^.&...
5B30:  01 F9 B8 1A 00 F7 6E F8  8B F0 C4 5E 06 26 8B 80   ......n. ...^.&..
5B40:  B6 01 99 01 46 E8 11 56  EA B8 1A 00 F7 6E F8 8B   ....F..V .....n..
5B50:  F0 C4 5E 06 26 8B 80 B8  01 99 01 46 E2 11 56 E4   ..^.&... ...F..V.
5B60:  B8 1A 00 F7 6E F8 8B F0  C4 5E 06 8B 46 FE 26 39   ....n... .^..F.&9
5B70:  80 B8 01 7C 03 E9 13 00  B8 1A 00 F7 6E F8 8B F0   ...|.... ....n...
5B80:  C4 5E 06 26 8B 80 B8 01  89 46 FE B8 1A 00 F7 6E   .^.&.... .F.....n
5B90:  F8 8B F0 C4 5E 06 8B 46  FC 26 39 80 B8 01 7F 03   ....^..F .&9.....
5BA0:  E9 13 00 B8 1A 00 F7 6E  F8 8B F0 C4 5E 06 26 8B   .......n ....^.&.
5BB0:  80 B8 01 89 46 FC B8 1A  00 F7 6E F8 8B F0 C4 5E   ....F... ..n....^
5BC0:  06 26 8A 80 CE 01 25 80  00 B1 07 D3 E8 C4 5E 0A   .&....%. ......^.
5BD0:  26 01 47 0A FF 76 F8 8B  46 06 8B 56 08 05 B6 01   &.G..v.. F..V....
5BE0:  52 50 9A 02 00 87 08 83  C4 06 89 46 F8 83 7E F8   RP...... ...F..~.
5BF0:  FF 75 03 E9 4A 01 B8 1A  00 F7 6E F8 8B F0 C4 5E   .u..J... ..n....^
5C00:  06 26 F6 80 CE 01 08 75  03 E9 7F 00 C4 5E 0A 26   .&.....u .....^.&
5C10:  FF 47 04 C7 46 F4 00 00  E9 03 00 FF 46 F4 83 7E   .G..F... ....F..~
5C20:  F4 03 7C 03 E9 64 00 B8  1A 00 F7 6E F8 8B F0 8B   ..|..d.. ...n....
5C30:  46 F4 8B C8 D1 E0 03 C1  D1 E0 03 F0 C4 5E 06 26   F....... .....^.&
5C40:  83 B8 BA 01 FF 74 03 E9  3E 00 B8 1A 00 F7 6E F8   .....t.. >.....n.
5C50:  8B F0 8B 46 F4 8B C8 D1  E0 03 C1 D1 E0 03 F0 C4   ...F.... ........
5C60:  5E 06 26 C7 80 BC 01 FF  FF B8 1A 00 F7 6E F8 8B   ^.&..... .....n..
5C70:  F0 8B 46 F4 8B C8 D1 E0  03 C1 D1 E0 03 F0 C4 5E   ..F..... .......^
5C80:  06 26 C7 80 BE 01 FF FF  E9 90 FF B8 1A 00 F7 6E   .&...... .......n
5C90:  F8 8B F0 C4 5E 06 26 8B  80 C0 01 89 46 F6 B8 1A   ....^.&. ....F...
5CA0:  00 F7 6E F8 8B F0 C4 5E  06 26 F6 80 CE 01 01 75   ..n....^ .&.....u
5CB0:  03 E9 1D 00 B8 1A 00 F7  6E F8 8B F0 C4 5E 06 26   ........ n....^.&
5CC0:  F6 80 CE 01 10 74 03 E9  07 00 C4 5E 0A 26 FF 47   .....t.. ...^.&.G
5CD0:  08 B8 1A 00 F7 6E F6 8B  F0 C4 5E 06 26 F6 80 CE   .....n.. ..^.&...
5CE0:  01 01 74 03 E9 16 00 B8  1A 00 F7 6E F8 8B F0 C4   ..t..... ...n....
5CF0:  5E 06 26 F6 80 CE 01 01  75 03 E9 07 00 C4 5E 0A   ^.&..... u.....^.
5D00:  26 FF 47 06 B8 1A 00 F7  6E F8 8B F0 C4 5E 06 26   &.G..... n....^.&
5D10:  8B 80 C4 01 89 46 FA 83  7E FA 00 7F 03 E9 0A 00   .....F.. ~.......
5D20:  8B 46 FA C4 5E 0A 26 01  47 02 C4 5E 0A 26 83 7F   .F..^.&. G..^.&..
5D30:  02 00 7C 03 E9 09 00 C4  5E 0A 26 C7 47 02 30 75   ..|..... ^.&.G.0u
5D40:  E9 D5 FD E9 B2 FD C4 5E  06 26 8B 47 02 99 52 50   .......^ .&.G..RP
5D50:  FF 76 EA FF 76 E8 9A 94  2A F2 0B C4 5E 0A 26 89   .v..v... *...^.&.
5D60:  47 10 C4 5E 06 26 8B 47  02 99 52 50 FF 76 E4 FF   G..^.&.G ..RP.v..
5D70:  76 E2 9A 94 2A F2 0B C4  5E 0A 26 89 47 12 8B 46   v...*... ^.&.G..F
5D80:  FE C4 5E 0A 26 89 47 14  8B 46 FC C4 5E 0A 26 89   ..^.&.G. .F..^.&.
5D90:  47 16 5E 5F 8B E5 5D CB  55 8B EC 81 EC 16 00 57   G.^_..]. U......W
5DA0:  56 8D 46 EA 16 50 8D 46  EE 16 50 9A BF 05 33 0A   V.F..P.F ..P...3.
5DB0:  83 C4 08 C4 5E 0A 26 C7  47 18 00 00 8B 46 EE 48   ....^.&. G....F.H
5DC0:  C4 5E 0A 26 89 47 1A C4  5E 0A 26 8B 47 14 05 0A   .^.&.G.. ^.&.G...
5DD0:  00 C4 5E 0A 26 8B 4F 12  81 E9 8C 00 3B C1 7C 03   ..^.&.O. ....;.|.
5DE0:  E9 02 00 8B C1 89 46 FC  C4 5E 0A 26 8B 47 16 2D   ......F. .^.&.G.-
5DF0:  0A 00 C4 5E 0A 26 8B 4F  12 81 C1 8C 00 3B C1 7F   ...^.&.O .....;..
5E00:  03 E9 02 00 8B C1 89 46  F8 B8 00 00 89 46 F4 89   .......F .....F..
5E10:  46 FA C7 46 F0 00 00 E9  03 00 FF 46 F0 C4 5E 06   F..F.... ...F..^.
5E20:  8B 46 F0 26 39 47 02 7F  03 E9 87 00 B8 1A 00 8B   .F.&9G.. ........
5E30:  76 F0 8B CE D1 E6 03 F1  D1 E6 C4 5E 06 26 F7 A8   v....... ...^.&..
```

```
5E40:  FA 52 8B F0 C4 5E 06 26  F6 80 CE 01 01 74 03 E9   .R...^.& .....t..
5E50:  5E 00 8B 76 F0 8B C6 D1  E6 03 F0 D1 E6 C4 5E 06   ^..v.... ......^.
5E60:  8B 46 FC 26 39 80 F8 52  7F 03 E9 43 00 8B 76 F0   .F.&9..R ...C..v.
5E70:  8B C6 D1 E6 03 F0 D1 E6  C4 5E 06 8B 46 F8 26 39   ........ .^..F.&9
5E80:  80 F8 52 7C 03 E9 28 00  C4 5E 0A 26 8B 47 10 8B   ..R|..(. .^.&.G..
5E90:  76 F0 8B CE D1 E6 03 F1  D1 E6 C4 5E 06 26 39 80   v....... ...^.&9.
5EA0:  F6 52 7C 03 E9 06 00 FF  46 FA E9 03 00 FF 46 F4   .R|..... F.....F.
5EB0:  E9 67 FF B8 28 00 F7 6E  FA B9 64 00 99 F7 F9 89   .g..(..n ..d.....
5EC0:  46 F6 B8 3C 00 F7 6E F4  99 F7 F9 89 46 F2 B8 00   F..<..n. ....F...
5ED0:  00 89 46 FE 89 46 EC C7  46 F0 00 00 E9 03 00 FF   ..F..F.. F.......
5EE0:  46 F0 C4 5E 06 8B 46 F0  26 39 47 02 7F 03 E9 D1   F..^..F. &9G.....
5EF0:  00 B8 1A 00 8B 76 F0 8B  CE D1 E6 03 F1 D1 E6 C4   .....v.. ........
5F00:  5E 06 26 F7 A8 FA 52 8B  F0 C4 5E 06 26 F6 80 CE   ^.&...R. ..^.&...
5F10:  01 01 74 03 E9 A8 00 8B  76 F0 8B C6 D1 E6 03 F0   ..t..... v.......
5F20:  D1 E6 C4 5E 06 8B 46 FC  26 39 80 F8 52 7F 03 E9   ...^..F. &9..R...
5F30:  8D 00 8B 76 F0 8B C6 D1  E6 03 F0 D1 E6 C4 5E 06   ...v.... ......^.
5F40:  8B 46 F8 26 39 80 F8 52  7C 03 E9 72 00 C4 5E 0A   .F.&9..R |..r..^.
5F50:  26 8B 47 10 8B 76 F0 8B  CE D1 E6 03 F1 D1 E6 C4   &.G..v.. ........
5F60:  5E 06 26 39 80 F6 52 7C  03 E9 2B 00 FF 46 EC 8B   ^.&9..R| ..+..F..
5F70:  46 EC 39 46 F6 74 03 E9  1A 00 8B 76 F0 8B C6 D1   F.9F.t.. ...v....
5F80:  E6 03 F0 D1 E6 C4 5E 06  26 8B 80 F6 52 C4 5E 0A   ......^. &...R.^.
5F90:  26 89 47 18 E9 28 00 FF  46 FE 8B 46 F2 39 46 FE   &.G..(.. F..F.9F.
5FA0:  74 03 E9 1A 00 8B 76 F0  8B C6 D1 E6 03 F0 D1 E6   t.....v. ........
5FB0:  C4 5E 06 26 8B 80 F6 52  C4 5E 0A 26 89 47 1A E9   .^.&...R .^.&.G..
5FC0:  1D FF 5E 5F 8B E5 5D CB  55 8B EC 81 EC 14 00 57   ..^_..]. U......W
5FD0:  56 8B 76 0C 8B C6 D1 E6  03 F0 D1 E6 C4 5E 08 26   V.v..... .....^.&
5FE0:  8B 80 FA 52 89 46 FA C7  46 F0 01 00 B8 1A 00 F7   ...R.F.. F.......
5FF0:  6E FA 8B F0 C4 5E 08 26  83 B8 C0 01 FF 74 03 E9   n....^.& .....t..
6000:  05 00 C7 46 F0 00 00 B8  1A 00 F7 6E FA 8B F0 8B   ...F.... ...n....
6010:  46 F0 8B C8 D1 E0 03 C1  D1 E0 03 F0 C4 5E 08 26   F....... .....^.&
6020:  8B 80 BC 01 89 46 F8 8B  46 F8 B9 B4 00 99 F7 F9   .....F.. F.......
6030:  83 FA 5A 75 03 E9 CB 01  FF 76 F8 9A A0 02 56 08   ..Zu.... .v....V.
6040:  83 C4 02 89 46 FC 8B 46  0E 99 F7 D8 83 D2 00 F7   ....F..F ........
6050:  DA 89 46 F2 89 56 F4 8B  46 FC 99 52 50 8D 46 F2   ..F..V.. F..RP.F.
6060:  50 9A 8C 2B F2 0B B8 E8  03 BA 00 00 52 50 FF 76   P..+.... ....RP.v
6070:  F4 FF 76 F2 9A 94 2A F2  0B 89 46 F6 FF 76 F6 9A   ..v...*. ..F..v..
6080:  1E 2A F2 0B 83 C4 02 3D  3C 00 7E 03 E9 74 01 8B   .*.....= <.~..t..
6090:  46 0E 8B 76 0C 8B CE D1  E6 03 F1 D1 E6 C4 5E 08   F..v.... ......^.
60A0:  26 01 80 F6 52 8B 76 0C  8B C6 D1 E6 03 F0 D1 E6   &...R.v. ........
60B0:  C4 5E 08 26 8B 80 F6 52  8B C8 B8 1A 00 F7 6E FA   .^.&...R ......n.
60C0:  8B F0 C4 5E 08 26 89 88  B6 01 8B 46 F6 8B 76 0C   ...^.&.. ...F..v.
60D0:  8B CE D1 E6 03 F1 D1 E6  C4 5E 08 26 01 80 F8 52   ........ .^.&...R
60E0:  8B 76 0C 8B C6 D1 E6 03  F0 D1 E6 C4 5E 08 26 8B   .v...... ....^.&.
60F0:  80 F8 52 8B C8 B8 1A 00  F7 6E FA 8B F0 C4 5E 08   ..R..... .n....^.
6100:  26 89 88 B8 01 FF 76 0E  9A 1E 2A F2 0B 83 C4 02   &.....v. ..*.....
6110:  B9 10 27 F7 E9 89 46 F2  89 56 F4 FF 76 F8 9A 9B   ..'...F. .V..v...
6120:  00 56 08 83 C4 02 50 9A  1E 2A F2 0B 83 C4 02 3D   .V....P. .*.....=
6130:  01 00 7C 03 E9 06 00 B8  01 00 E9 14 00 FF 76 F8   ..|..... ......v.
6140:  9A 9B 00 56 08 83 C4 02  50 9A 1E 2A F2 0B 83 C4   ...V.... P..*....
6150:  02 99 52 50 8D 46 F2 50  9A 6C 2B F2 0B 8B 46 F2   ..RP.F.P .l+...F.
6160:  89 46 EE B8 1A 00 F7 6E  FA 8B F0 8B 46 F0 8B C8   .F.....n ....F...
6170:  D1 E0 03 C1 D1 E0 03 F0  C4 5E 08 8B 46 EE 26 01   ........ .^..F.&.
6180:  80 BE 01 B8 1A 00 F7 6E  FA 8B F0 8B 46 F0 8B C8   .......n ....F...
6190:  D1 E0 03 C1 D1 E0 03 F0  C4 5E 08 26 8B 80 BA 01   ........ .^.&....
```

```
61A0:  89 46 FE 83 7E F0 01 74  03 E9 44 00 B8 1A 00 F7   .F..¯..t ..D.....
61B0:  6E FE 8B F0 C4 5E 08 8B  46 FA 26 39 80 BA 01 74   n....^.. F.&9...t
61C0:  03 E9 16 00 B8 1A 00 F7  6E FE 8B F0 C4 5E 08 8B   ........ n....^..
61D0:  46 EE 26 01 80 BE 01 E9  13 00 B8 1A 00 F7 6E FE   F.&..... ......n.
61E0:  8B F0 C4 5E 08 8B 46 EE  26 01 80 CA 01 E9 13 00   ...^..F. &.......
61F0:  B8 1A 00 F7 6E FE 8B F0  C4 5E 08 8B 46 EE 26 01   ....n... .^..F.&.
6200:  80 C4 01 5E 5F 8B E5 5D  CB 55 8B EC 81 EC 06 00   ...^_..] .U......
6210:  57 56 C4 5E 0C 26 8B 47  14 05 0A 00 C4 5E 0C 26   WV.^.&.G .....^.&
6220:  8B 4F 12 81 E9 8C 00 3B  C1 7C 03 E9 02 00 8B C1   .O.....; .|......
6230:  89 46 FE C4 5E 0C 26 8B  47 16 2D 0A 00 C4 5E 0C   .F..^.&. G.-...^.
6240:  26 8B 4F 12 81 C1 8C 00  3B C1 7F 03 E9 02 00 8B   &.O..... ;.......
6250:  C1 89 46 FC C7 46 FA 00  00 E9 03 00 FF 46 FA C4   ..F..F.. .....F..
6260:  5E 08 8B 46 FA 26 39 47  02 7F 03 E9 2D 01 B8 1A   ^..F.&9G ....-...
6270:  00 8B 76 FA 8B CE D1 E6  03 F1 D1 E6 C4 5E 08 26   ..v..... .....^.&
6280:  F7 A8 FA 52 8B F0 C4 5E  08 26 F6 80 CE 01 01 74   ...R...^ .&.....t
6290:  03 E9 04 01 8B 76 FA 8B  C6 D1 E6 03 F0 D1 E6 C4   .....v.. ........
62A0:  5E 08 8B 46 FE 26 39 80  F8 52 7F 03 E9 E9 00 8B   ^..F.&9. .R......
62B0:  76 FA 8B C6 D1 E6 03 F0  D1 E6 C4 5E 08 8B 46 FC   v....... ...^..F.
62C0:  26 39 80 F8 52 7C 03 E9  CE 00 83 7E 10 00 74 03   &9..R|.. ...¯..t.
62D0:  E9 64 00 C4 5E 0C 26 8B  47 10 8B 76 FA 8B CE D1   .d..^.&. G..v....
62E0:  E6 03 F1 D1 E6 C4 5E 08  26 39 80 F6 52 7C 03 E9   ......^. &9..R|..
62F0:  42 00 8B 76 FA 8B C6 D1  E6 03 F0 D1 E6 C4 5E 08   B..v.... ......^.
6300:  26 8B 80 F6 52 C4 5E 0C  26 2B 47 18 50 9A 1E 2A   &...R.^. &+G.P..*
6310:  F2 0B 83 C4 02 3D 1E 00  7C 03 E9 17 00 FF 76 12   .....=.. |.....v.
6320:  FF 76 FA FF 76 0A FF 76  08 FF 76 06 9A 18 1E FB   .v..v..v ..v.....
6330:  03 83 C4 0A E9 61 00 C4  5E 0C 26 8B 47 10 8B 76   .....a.. ^.&.G..v
6340:  FA 8B CE D1 E6 03 F1 D1  E6 C4 5E 08 26 39 80 F6   ........ ..^.&9..
6350:  52 7F 03 E9 42 00 8B 76  FA 8B C6 D1 E6 03 F0 D1   R...B..v ........
6360:  E6 C4 5E 08 26 8B 80 F6  52 C4 5E 0C 26 2B 47 1A   ..^.&... R.^.&+G.
6370:  50 9A 1E 2A F2 0B 83 C4  02 3D 1E 00 7C 03 E9 17   P..*.... .=..|...
6380:  00 FF 76 12 FF 76 FA FF  76 0A FF 76 08 FF 76 06   ..v..v.. v..v..v.
6390:  9A 18 1E FB 03 83 C4 0A  E9 C1 FE 5E 5F 8B E5 5D   ........ ...^_..]
63A0:  CB 55 8B EC 81 EC 16 00  57 56 C7 46 FA 00 00 C7   .U...... WV.F¯...
63B0:  46 FC 00 00 8B 46 0A D1  E0 89 46 F4 8B 46 F4 03   F....F.. ..F..F..
63C0:  46 14 3B 06 56 0C 7F 03  E9 03 00 A1 56 0C 89 46   F.;.V... ....V..F
63D0:  EE 8B 46 F4 03 46 16 3B  06 58 0C 7F 03 E9 03 00   ..F..F.; .X......
63E0:  A1 58 0C 89 46 EC 8B 46  14 89 46 F6 E9 03 00 FF   .X..F..F ..F.....
63F0:  46 F6 8B 46 F6 39 46 EE  7F 03 E9 36 00 8B 46 16   F..F.9F. ...6..F.
6400:  89 46 F2 E9 03 00 FF 46  F2 8B 46 F2 39 46 EC 7F   .F.....F ..F.9F..
6410:  03 E9 1C 00 B8 3C 00 F7  6E F2 8B D8 03 5E 06 8E   .....<.. n....^..
6420:  46 08 8B 76 F6 26 8A 00  2A E4 01 46 FC E9 D6 FF   F..v.&.. *..F....
6430:  E9 BC FF 8B 46 18 2B 46  0A 03 46 14 8B 0E 56 0C   ....F.+F ..F...V.
6440:  2B 4E 0A 3B C1 7F 03 E9  02 00 8B C1 89 46 EE 8B   +N.;.... .....F..
6450:  46 1A 2B 46 0A 03 46 16  8B 0E 58 0C 2B 4E 0A 3B   F.+F..F. ..X.+N.;
6460:  C1 7F 03 E9 02 00 8B C1  89 46 EC 8B 46 0A 01 46   ........ .F..F..F
6470:  14 8B 46 0A 01 46 16 8B  46 14 89 46 F6 E9 03 00   ..F..F.. F..F....
6480:  FF 46 F6 8B 46 F6 39 46  EE 7D 03 E9 7B 01 8B 46   .F..F.9F .}..{..F
6490:  FC 89 46 F8 8B 46 F6 39  46 14 75 03 E9 5A 00 8B   ..F..F.9 F.u..Z..
64A0:  46 16 2B 46 0A 89 46 F0  E9 03 00 FF 46 F0 8B 46   F.+F..F. ....F..F
64B0:  16 03 46 0A 3B 46 F0 7D  03 E9 3D 00 B8 3C 00 F7   ..F.;F.} ..=..<..
64C0:  6E F0 8B D8 2B 5E 0A 03  5E 06 8E 46 08 4B 8B 76   n...+^.. ^..F.K.v
64D0:  F6 26 8A 00 2A E4 8B C8  B8 3C 00 F7 6E F0 8B D8   .&..*... .<..n...
64E0:  03 5E 06 8E 46 08 03 5E  0A 8B 76 F6 26 8A 00 2A   .^..F..^ ..v.&..*
64F0:  E4 2B C1 01 46 F8 E9 32  FF 8B 46 F8 89 46 FC 8B   .+..F... ..F..F..
```

```
6500:  46 16 89 46 F2 E9 03 00  FF 46 F2 8B 46 F2 39 46   F..F.... .F..F.9F
6510:  EC 7D 03 E9 F0 00 8B 46  F2 39 46 16 75 03 E9 5B   .}.....F .9F.u..[
6520:  00 8B 46 F6 2B 46 0A 89  46 F0 E9 03 00 FF 46 F0   ..F.+F.. F.....F.
6530:  8B 46 0A 03 46 F6 3B 46  F0 7D 03 E9 3E 00 8B 46   .F..F.;F .}..>..F
6540:  F2 2B 46 0A B9 3C 00 F7  E9 8B D0 8B 46 0A 03 46   .+F..<.. ....F..F
6550:  F2 8B DA F7 E9 8B D3 C4  5E 06 03 D8 8B 76 F0 26   ........ ^....v.&
6560:  8A 00 2A E4 C4 5E 06 03  DA 83 EB 3C 8B 76 F0 26   ..*..^.. ...<.v.&
6570:  8A 10 2A F6 2B C2 01 46  F8 E9 B1 FF 8B 46 FA 39   ..*.+..F .....F.9
6580:  46 F8 7F 03 E9 21 00 8B  46 F8 89 46 FA 8B 46 F6   F....!.. F..F..F.
6590:  89 46 EA C4 5E 0C 26 89  07 8B 46 F2 89 46 FE C4   .F..^.&. ..F..F..
65A0:  5E 10 26 89 07 E9 5B 00  8B 46 FA 39 46 F8 74 03   ^.&...[. .F.9F.t.
65B0:  E9 50 00 8B 46 F6 2B 46  EA 50 9A 1E 2A F2 0B 83   .P..F.+F .P..*...
65C0:  C4 02 3B 46 0A 7E 03 E9  39 00 8B 46 F2 2B 46 FE   ..;F.~.. 9..F.+F.
65D0:  50 9A 1E 2A F2 0B 83 C4  02 3B 46 0A 7E 03 E9 22   P..*.... .;F.~.."
65E0:  00 8B 46 EA 03 46 F6 99  2B C2 D1 F8 C4 5E 0C 26   ..F..F.. +....^.&
65F0:  89 07 8B 46 FE 03 46 F2  99 2B C2 D1 F8 C4 5E 10   ...F..F. .+....^.
6600:  26 89 07 E9 02 FF E9 77  FE 83 7E FA 00 7F 03 E9   &......w ..~.....
6610:  32 00 C4 5E 0C 26 8B 07  8E 06 22 0B 26 2B 06 06   2..^.&.. ..".&+..
6620:  F0 F7 2E 34 01 C4 5E 0C  26 89 07 C4 5E 10 26 8B   ...4..^. &...^.&.
6630:  07 8E 06 24 0B 26 2B 06  90 F0 F7 2E 34 01 C4 5E   ...$.&+. ....4..^
6640:  10 26 89 07 8B 46 FA E9  00 00 5E 5F 8B E5 5D CB   .&...F.. ..^_..].
6650:  55 8B EC 81 EC 10 00 57  56 8E 06 26 0B 26 A1 8A   U......W V..&.&..
6660:  00 99 F7 3E 34 01 89 46  FE 8E 06 28 0B 26 A1 8C   ...>4..F ...(.&..
6670:  00 99 F7 3E 34 01 89 46  FC 8B 46 06 99 F7 3E 34   ...>4..F ..F...>4
6680:  01 89 46 F8 8B 46 08 99  F7 3E 34 01 89 46 F4 FF   ..F..F.. .>4..F..
6690:  76 F8 9A 1E 2A F2 0B 83  C4 02 8B 4E FE 2B 4E 0A   v...*... ...N.+N.
66A0:  3B C1 7E 03 E9 18 00 FF  76 F4 9A 1E 2A F2 0B 83   ;.~..... v...*...
66B0:  C4 02 8B 4E FC 2B 4E 0A  3B C1 7F 03 E9 06 00 B8   ...N.+N. ;.......
66C0:  00 00 E9 7F 00 8E 06 22  0B 26 A1 06 F0 01 46 F8   ......." .&....F.
66D0:  8E 06 24 0B 26 A1 90 F0  01 46 F4 8B 46 0A 03 46   ..$.&... .F..F..F
66E0:  F8 89 46 F2 8B 46 0A 03  46 F4 89 46 F0 8B 46 F8   ..F..F.. F..F..F.
66F0:  2B 46 0A 89 46 FA E9 03  00 FF 46 FA 8B 46 FA 39   +F..F... ..F..F.9
6700:  46 F2 7F 03 E9 37 00 8B  46 F4 2B 46 0A 89 46 F6   F....7.. F.+F..F.
6710:  E9 03 00 FF 46 F6 8B 46  F6 39 46 F0 7F 03 E9 1A   ....F..F .9F.....
6720:  00 B8 3C 00 F7 6E F6 8B  D8 03 5E FA 8E 06 34 0B   ..<..n.. ..^...4.
6730:  8A 46 0C 26 00 87 00 00  E9 D8 FF E9 BB FF B8 01   .F.&.... ........
6740:  00 E9 00 00 5E 5F 8B E5  5D CB 55 8B EC 81 EC 02   ....^_.. ].U.....
6750:  00 57 56 B8 1A 00 8E 06  1E 0B 26 F7 2E 44 66 8B   .WV..... ..&..Df.
6760:  D8 8E 06 30 0B 8B 46 0A  26 89 87 DC 72 B8 1A 00   ...0..F. &...r...
6770:  8E 06 1E 0B 26 F7 2E 44  66 8B D8 8E 06 30 0B 8B   ....&..D f....0..
6780:  46 0C 26 89 87 DE 72 8E  06 1E 0B 26 FF 06 44 66   F.&...r. ...&..Df
6790:  B8 1A 00 26 F7 2E 44 66  8B D8 8E 06 30 0B 8B 46   ...&..Df ....0..F
67A0:  06 26 89 87 DC 72 B8 1A  00 8E 06 1E 0B 26 F7 2E   .&...r.. .....&..
67B0:  44 66 8B D8 8E 06 30 0B  8B 46 08 26 89 87 DE 72   Df....0. .F.&...r
67C0:  B8 1A 00 F7 6E 0C 8B D8  8E 06 2C 0B 26 FF B7 46   ....n... ..,.&..F
67D0:  02 B8 1A 00 F7 6E 0C 8B  D8 26 FF B7 44 02 B8 1A   .....n.. .&..D...
67E0:  00 F7 6E 0A 8B D8 26 FF  B7 46 02 B8 1A 00 F7 6E   ..n...&. .F.....n
67F0:  0A 8B D8 26 FF B7 44 02  B8 1A 00 F7 6E 08 8B D8   ...&..D. ....n...
6800:  8E 06 2A 0B 26 FF B7 9C  8B B8 1A 00 F7 6E 08 8B   ..*.&... .....n..
6810:  D8 26 FF B7 9A 8B B8 1A  00 F7 6E 06 8B D8 26 FF   .&...... ..n...&.
6820:  B7 9C 8B B8 1A 00 F7 6E  06 8B D8 26 FF B7 9A 8B   .......n ...&....
6830:  9A 84 01 87 08 83 C4 10  50 9A 1E 2A F2 0B 83 C4   ........ P..*....
6840:  02 89 46 FE B8 1A 00 8E  06 1E 0B 26 F7 2E 44 66   ..F..... ...&..Df
6850:  8B D8 8E 06 30 0B 8B 46  FE 26 89 87 F0 72 B8 1A   ....0..F .&...r..
```

```
6860:  00 F7 6E 06 8B D8 8E 06  2A 0B 26 8B 87 9A 8B 8B   ..n..... *.&.....
6870:  C8 B8 1A 00 F7 6E 0A 8B  D8 8E 06 2C 0B 26 2B 8F   .....n.. ...,.&+.
6880:  44 02 B8 1A 00 8E 06 1E  0B 26 F7 2E 44 66 8B D8   D....... .&..Df..
6890:  8E 06 30 0B 26 89 8F E4  72 B8 1A 00 F7 6E 08 8B   ..0.&... r....n..
68A0:  D8 8E 06 2A 0B 26 8B 87  9A 8B 8B C8 B8 1A 00 F7   ...*.&.. ........
68B0:  6E 0C 8B D8 8E 06 2C 0B  26 2B 8F 44 02 B8 1A 00   n.....,. &+.D....
68C0:  8E 06 1E 0B 26 F7 2E 44  66 8B D8 8E 06 30 0B 26   ....&..D f....0.&
68D0:  89 8F E6 72 B8 1A 00 F7  6E 06 8B D8 8E 06 2A 0B   ...r.... n.....*.
68E0:  26 8B 87 9C 8B 8B C8 B8  1A 00 F7 6E 0A 8B D8 8E   &....... ...n....
68F0:  06 2C 0B 26 2B 8F 46 02  B8 1A 00 8E 06 1E 0B 26   .,.&+.F. .......&
6900:  F7 2E 44 66 8B D8 8E 06  30 0B 26 89 8F E8 72 B8   ..Df.... 0.&...r.
6910:  1A 00 F7 6E 08 8B D8 8E  06 2A 0B 26 8B 87 9C 8B   ...n.... .*.&....
6920:  8B C8 B8 1A 00 F7 6E 0C  8B D8 8E 06 2C 0B 26 2B   ......n. ....,.&+
6930:  8F 46 02 B8 1A 00 8E 06  1E 0B 26 F7 2E 44 66 8B   .F...... ..&..Df.
6940:  D8 8E 06 30 0B 26 89 8F  EA 72 B8 1A 00 F7 6E 0C   ...0.&.. .r....n.
6950:  8B D8 8E 06 2C 0B B8 1A  00 F7 6E 0A 8B F0 26 8B   ....,... ..n...&.
6960:  84 46 02 26 2B 87 46 02  99 52 50 52 50 9A 2E 2B   .F.&+.F. .RPRP..+
6970:  F2 0B 8B C8 B8 1A 00 8B  DA F7 6E 0C 8B F0 8E 06   ........ ..n.....
6980:  2C 0B B8 1A 00 F7 6E 0A  8B F8 26 8B 85 44 02 26   ,.....n. ..&..D.&
6990:  2B 84 44 02 99 52 50 52  50 8B F1 8B FB 9A 2E 2B   +.D..RPR P......+
69A0:  F2 0B 03 F0 13 FA 57 56  9A 34 01 56 08 83 C4 04   ......WV .4.V....
69B0:  8B C8 B8 1A 00 8E 06 1E  0B 26 F7 2E 44 66 8B D8   ........ .&..Df..
69C0:  8E 06 30 0B 26 89 8F F4  72 B8 1A 00 8E 06 1E 0B   ..0.&... r.......
69D0:  26 F7 2E 44 66 8B D8 8E  06 30 0B 8B 46 0E 26 89   &..Df... .0..F.&.
69E0:  87 F2 72 B8 1A 00 8E 06  1E 0B 26 F7 2E 44 66 8B   ..r..... ..&..Df.
69F0:  D8 8E 06 30 0B 26 C7 87  EC 72 00 00 B8 1A 00 8E   ...0.&.. .r......
6A00:  06 1E 0B 26 F7 2E 44 66  8B D8 8E 06 30 0B 26 C7   ...&..Df ....0.&.
6A10:  87 EE 72 00 00 8E 06 1E  0B 26 FF 06 44 66 B8 1A   ..r..... .&..Df..
6A20:  00 26 F7 2E 44 66 8B D8  8E 06 30 0B 26 C7 87 DC   .&..Df.. ..0.&...
6A30:  72 FF FF 8E 06 1E 0B 26  FF 06 44 66 8E 06 20 0B   r......& ..Df.. .
6A40:  26 FF 06 B2 F1 5E 5F 8B  E5 5D CB 55 8B EC 81 EC   &....^_. .].U....
6A50:  00 00 57 56 FF 76 06 9A  1E 2A F2 0B 83 C4 02 8E   ..WV.v.. .*......
6A60:  06 26 0B 26 3B 06 8A 00  7C 03 E9 7F 00 FF 76 08   .&.&;... |.....v.
6A70:  9A 1E 2A F2 0B 83 C4 02  8E 06 28 0B 26 3B 06 8C   ..*..... ..(.&;..
6A80:  00 7C 03 E9 66 00 8B 46  08 99 F7 3E 34 01 8E 06   .|..f..F ...>4...
6A90:  24 0B 26 03 06 90 F0 8B  C8 D1 E0 D1 E0 03 C1 D1   $.&..... ........
6AA0:  E0 05 05 00 B9 0A 00 99  F7 F9 BB 3C 00 F7 EB 8B   ........ ...<....
6AB0:  D8 8B 46 06 99 F7 3E 34  01 8E 06 22 0B 26 03 06   ..F...>4 ...".&..
6AC0:  06 F0 8B D0 D1 E0 D1 E0  03 C2 D1 E0 05 05 00 99   ........ ........
6AD0:  F7 F9 03 D8 8E 06 34 0B  8A 46 0A 26 00 87 00 00   ......4. .F.&....
6AE0:  8B 46 0A 8E 06 1C 0B 26  01 06 8E 89 5E 5F 8B E5   .F.....& ....^_..
6AF0:  5D CB 55 8B EC 81 EC 08  00 57 56 B8 36 01 1E 50   ].U..... .WV.6..P
6B00:  B8 39 01 1E 50 9A 36 07  F2 0B 83 C4 08 89 46 F8   .9..P.6. ......F.
6B10:  89 56 FA C7 46 FC 00 00  E9 03 00 FF 46 FC A1 58   .V..F... ....F..X
6B20:  0C 39 46 FC 7C 03 E9 59  00 C7 46 FE 00 00 E9 03   .9F.|..Y ..F.....
6B30:  00 FF 46 FE A1 56 0C 39  46 FE 7C 03 E9 2D 00 B8   ..F..V.9 F.|..-..
6B40:  3C 00 F7 6E FC 8B D8 03  5E FE 8E 06 34 0B 26 8A   <..n.... ^...4.&.
6B50:  87 00 00 2A E4 50 B8 43  01 1E 50 FF 76 FA FF 76   ...*.P.C ..P.v..v
6B60:  F8 9A 52 07 F2 0B 83 C4  0A E9 C5 FF B8 48 01 1E   ..R..... .....H..
6B70:  50 FF 76 FA FF 76 F8 9A  52 07 F2 0B 83 C4 08 E9   P.v..v.. R.......
6B80:  99 FF FF 76 FA FF 76 F8  9A 3C 06 F2 0B 83 C4 04   ...v..v. .<......
6B90:  5E 5F 8B E5 5D CB 55 8B  EC 81 EC 00 00 57 56 8B   ^_..].U. .....WV.
6BA0:  46 06 8E 06 36 0B 26 A3  78 00 5E 5F 8B E5 5D CB   F...6.&. x.^_..].
6BB0:  55 8B EC 81 EC 00 00 57  56 8E 06 38 0B 26 83 3E   U......W V..8.&.>
```

```
6BC0:  98 01 00 75 03 E9 09 00  A1 4C 01 E9 09 00 E9 06   ...u.... .L......
6BD0:  00 A1 4A 01 E9 00 00 5E  5F 8B E5 5D CB 55 8B EC   ..J....^ _..].U..
6BE0:  81 EC 74 00 57 56 8D 7E  F4 BE 5E 01 8C D0 8E C0   ..t.WV.~ ..^.....
6BF0:  B9 05 00 F3 A5 A4 B8 69  01 1E 50 8D 46 F4 16 50   .......i ..P.F..P
6C00:  9A 36 07 F2 0B 83 C4 08  89 46 F0 89 56 F2 0B D0   .6...... .F..V...
6C10:  75 03 E9 08 01 FF 76 F2  FF 76 F0 B8 64 00 50 8D   u.....v. .v..d.P.
6C20:  4E 8C 16 51 9A 70 26 F2  0B 83 C4 0A B8 4C 01 1E   N..Q.p&. .....L..
6C30:  50 B8 4A 01 1E 50 B8 6C  01 1E 50 8D 46 8C 16 50   P.J..P.l ..P.F..P
6C40:  9A B8 27 F2 0B 83 C4 10  FF 76 F2 FF 76 F0 B8 64   ..'..... .v..v..d
6C50:  00 50 8D 4E 8C 16 51 9A  70 26 F2 0B 83 C4 0A B8   .P.N..Q. p&......
6C60:  52 01 1E 50 B8 74 01 1E  50 8D 46 8C 16 50 9A B8   R..P.t.. P.F..P..
6C70:  27 F2 0B 83 C4 0C FF 76  F2 FF 76 F0 B8 64 00 50   '......v ..v..d.P
6C80:  8D 4E 8C 16 51 9A 70 26  F2 0B 83 C4 0A B8 50 01   .N..Q.p& ......P.
6C90:  1E 50 B8 4E 01 1E 50 B8  79 01 1E 50 8D 46 8C 16   .P.N..P. y..P.F..
6CA0:  50 9A B8 27 F2 0B 83 C4  10 FF 76 F2 FF 76 F0 B8   P..'.... ..v..v..
6CB0:  64 00 50 8D 4E 8C 16 51  9A 70 26 F2 0B 83 C4 0A   d.P.N..Q .p&.....
6CC0:  B8 56 01 1E 50 B8 54 01  1E 50 B8 81 01 1E 50 8D   .V..P.T. .P....P.
6CD0:  46 8C 16 50 9A B8 27 F2  0B 83 C4 10 FF 76 F2 FF   F..P..'. .....v..
6CE0:  76 F0 B8 64 00 50 8D 46  8C 16 50 9A 70 26 F2 0B   v..d.P.F ..P.p&..
6CF0:  83 C4 0A B8 5A 01 1E 50  B8 58 01 1E 50 B8 89 01   ....Z..P .X..P...
6D00:  1E 50 8D 46 8C 16 50 9A  B8 27 F2 0B 83 C4 10 FF   .P.F..P. .'......
6D10:  76 F2 FF 76 F0 9A 3C 06  F2 0B 83 C4 04 5E 5F 8B   v..v..<. .....^_.
6D20:  E5 5D CB 55 8B EC 81 EC  00 00 57 56 83 7E 06 06   .].U.... ..WV.~..
6D30:  7E 03 E9 18 00 8E 06 36  0B 26 83 3E 78 00 01 74   ~......6 .&.>x..t
6D40:  03 E9 12 00 83 7E 06 05  7F 03 E9 09 00 B8 01 00   .....~.. ........
6D50:  E9 09 00 E9 06 00 B8 00  00 E9 00 00 5E 5F 8B E5   ........ ....^_..
6D60:  5D CB 55 8B EC 81 EC 00  00 57 56 9A CF 12 99 06   ].U..... .WV.....
6D70:  B8 00 00 E9 81 00 8E 06  36 0B 26 83 3E 78 00 01   ........ 6.&.>x..
6D80:  75 03 E9 72 00 B8 E8 03  BA 00 00 52 50 B8 17 0B   u..r.... ...RP...
6D90:  BA 00 00 52 50 8E 06 3A  0B 26 FF 36 0E F0 26 FF   ...RP..: .&.6..&.
6DA0:  36 0C F0 9A 2E 2B F2 0B  B9 2F 13 BB 00 00 53 51   6....+.. ./....SQ
6DB0:  8E 06 3A 0B 26 FF 36 26  F0 26 FF 36 24 F0 8B F0   ..:.&.6& .&.6$...
6DC0:  8B FA 9A 2E 2B F2 0B 03  F0 13 FA 81 EE 50 3F 83   ....+... .....P?.
6DD0:  DF 16 57 56 9A 94 2A F2  0B 8E 06 3C 0B 26 A3 D8   ..WV..*. ...<.&..
6DE0:  89 26 81 3E D8 89 A4 06  7F 03 E9 0A 00 B8 FF FF   .&.>.... ........
6DF0:  26 A3 E0 89 E9 00 00 5E  5F 8B E5 5D CB 55 8B EC   &......^ _..].U..
6E00:  81 EC 20 00 57 56 8E 06  3C 0B 26 C7 06 E0 89 00   .. .WV.. <.&.....
6E10:  00 26 83 3E 9C 89 01 7C  03 E9 0D 00 26 C7 06 E0   .&.>...| ....&...
6E20:  89 FF FF B8 FF FF E9 62  02 B8 E8 03 BA 00 00 52   .......b .......R
6E30:  50 B8 97 7D BA 02 00 52  50 8E 06 3C 0B 26 A1 9A   P..}...R P..<.&..
6E40:  89 99 52 50 9A 2E 2B F2  0B 8E 06 3C 0B 8B C8 B8   ..RP..+. ...<....
6E50:  E9 30 8B DA 26 F7 2E 96  89 03 C1 13 D3 2D 07 6F   .0..&... .....-.o
6E60:  83 DA 1B 52 50 9A 94 2A  F2 0B 8E 06 3C 0B 26 A3   ...RP..* ....<.&.
6E70:  D8 89 8E 06 36 0B 26 83  3E 78 00 01 74 03 E9 06   ....6.&. >x..t...
6E80:  00 B8 00 00 E9 04 02 8E  06 3C 0B 26 A1 D8 89 8E   ........ .<.&....
6E90:  06 3E 0B 26 2B 06 98 00  8E 06 3A 0B 26 A3 7A F0   .>.&+... ..:.&.z.
6EA0:  8E 06 3E 0B 26 A1 98 00  99 05 88 13 83 D2 00 52   ..>.&... .......R
6EB0:  50 8E 06 3A 0B B8 E8 03  26 F7 2E 7A F0 52 50 9A   P..:.... &..z.RP.
6EC0:  94 2A F2 0B 99 89 46 FC  89 56 FE 8E 06 3E 0B 26   .*....F. .V...>.&
6ED0:  A1 98 00 99 05 88 13 83  D2 00 52 50 8E 06 3A 0B   ........ ..RP..:.
6EE0:  26 FF 36 7A F0 9A 1E 2A  F2 0B 83 C4 02 B9 E8 03   &.6z...* ........
6EF0:  F7 E9 52 50 9A 94 2A F2  0B 99 89 46 F8 89 56 FA   ..RP..*. ...F..V.
6F00:  8E 06 3E 0B 26 83 3E A4  00 00 74 03 E9 0F 00 8E   ..>.&.>. ..t.....
6F10:  06 3A 0B 26 A1 7A F0 26  A3 86 F0 E9 31 00 8E 06   .:.&.z.& ....1...
```

```
6F20:  3E 0B 26 A1 A4 00 3D 01  00 7C 03 E9 03 00 B8 01   >.&...=. .|......
6F30:  00 99 52 50 8E 06 3A 0B  B8 E8 03 26 F7 2E 7A F0   ..RP..:. ...&..z.
6F40:  52 50 9A 94 2A F2 0B 8E  06 3A 0B 26 A3 86 F0 B8   RP..*... .:.&....
6F50:  E8 03 BA 00 00 52 50 B8  2A 4B BA 05 00 52 50 8E   .....RP. *K...RP.
6F60:  06 3C 0B 26 A1 9C 89 99  52 50 9A 2E 2B F2 0B B9   .<.&.... RP..+...
6F70:  2B 10 BB 00 00 53 51 8E  06 3A 0B 26 FF 36 4A F0   +....SQ. .:.&.6J.
6F80:  26 FF 36 48 F0 8B F0 8B  FA 9A 2E 2B F2 0B B9 BA   &.6H.... ...+....
6F90:  84 BB 01 00 53 51 8E 06  3C 0B 8B C8 26 A1 8C 89   ....SQ.. <...&...
6FA0:  8B DA 99 52 50 89 4E F4  89 5E F6 9A 2E 2B F2 0B   ...RP.N. .^...+..
6FB0:  B9 2E D6 BB 00 00 53 51  8E 06 3C 0B 8B C8 26 A1   ......SQ ..<...&.
6FC0:  94 89 8B DA 99 52 50 89  4E F0 89 5E F2 9A 2E 2B   .....RP. N..^...+
6FD0:  F2 0B 8E 06 3C 0B 8B C8  B8 E6 0C 8B DA 26 F7 2E   ....<... .....&..
6FE0:  90 89 89 46 EC 89 56 EE  B8 51 ED 26 F7 2E 98 89   ...F..V. .Q.&....
6FF0:  2B 46 EC 1B 56 EE 89 46  E8 89 56 EA B8 98 1A 26   +F..V..F ..V....&
7000:  F7 2E 92 89 89 46 E4 89  56 E6 B8 27 60 26 F7 2E   .....F.. V..'`&..
7010:  9A 89 89 46 E0 89 56 E2  8B 46 E8 8B 56 EA 2B 46   ...F..V. .F..V.+F
7020:  E4 1B 56 E6 03 C8 13 DA  03 4E F0 13 5E F2 03 4E   ..V..... .N..^..N
7030:  F4 13 5E F6 03 4E E0 13  5E E2 03 F1 13 FB 81 EE   ..^..N.. ^.......
7040:  23 5B 83 DF 2B 57 56 9A  94 2A F2 0B 8E 06 3C 0B   #[..+WV. .*....<.
7050:  26 A3 D8 89 A1 50 01 26  39 06 D8 89 7F 03 E9 07   &....P.& 9.......
7060:  00 26 C7 06 E0 89 01 00  8E 06 3C 0B A1 4E 01 26   .&...... ..<..N.&
7070:  39 06 D8 89 7C 03 E9 07  00 26 C7 06 E0 89 FF FF   9...|... .&......
7080:  8E 06 3C 0B 26 A1 E0 89  E9 00 00 5E 5F 8B E5 5D   ..<.&... ...^_..]
7090:  CB 55 8B EC 81 EC 0C 00  57 56 B8 00 00 8E 06 3A   .U...... WV.....:
70A0:  0B 26 A3 7C F0 8E 06 3C  0B 26 A3 DA 89 B8 E8 03   .&.|...< .&......
70B0:  BA 00 00 52 50 B8 B3 15  BA 00 00 52 50 8E 06 3A   ...RP... ...RP..:
70C0:  0B 26 FF 36 4E F0 26 FF  36 4C F0 9A 2E 2B F2 0B   .&.6N.&. 6L...+..
70D0:  B9 25 09 BB 00 00 53 51  8E 06 3A 0B 26 FF 36 4A   .%....SQ ..:.&.6J
70E0:  F0 26 FF 36 48 F0 8B F0  8B FA 9A 2E 2B F2 0B B9   .&.6H... ....+...
70F0:  49 98 BB 00 00 53 51 8E  06 3C 0B 8B C8 26 A1 94   I....SQ. .<...&..
7100:  89 8B DA 99 52 50 89 4E  FC 89 5E FE 9A 2E 2B F2   ....RP.N ..^...+.
7110:  0B B9 75 24 BB 08 00 53  51 8E 06 3C 0B 8B C8 26   ..u$...S Q..<...&
7120:  A1 9C 89 8B DA 99 52 50  89 4E F8 89 5E FA 9A 2E   ......RP .N..^...
7130:  2B F2 0B 8E 06 3C 0B 8B  C8 B8 69 09 8B DA 26 F7   +....<.. ..i...&.
7140:  2E 98 89 89 46 F4 89 56  F6 B8 77 F1 26 F7 2E 92   ....F..V ..w.&...
7150:  89 2B 46 F4 1B 56 F6 03  C8 13 DA 03 4E F8 13 5E   .+F..V.. ....N..^
7160:  FA 03 4E FC 13 5E FE 03  F1 13 FB 81 EE 43 5E 83   ..N..^.. .....C^.
7170:  DF 34 57 56 9A 94 2A F2  0B 8E 06 3C 0B 26 A3 DC   .4WV..*. ...<.&..
7180:  89 8E 06 36 0B 26 83 3E  78 00 01 74 03 E9 3C 00   ...6.&.> x..t..<.
7190:  8E 06 3C 0B 26 A1 DC 89  26 A3 D6 89 A1 4A 01 26   ..<.&... &....J.&
71A0:  39 06 D6 89 7F 03 E9 0A  00 26 C7 06 E0 89 02 00   9....... .&......
71B0:  E9 0B 00 8E 06 3C 0B 26  C7 06 E0 89 FE FF 8E 06   .....<.& ........
71C0:  3C 0B 26 A1 E0 89 E9 56  01 E9 53 01 8E 06 3C 0B   <.&....V ..S...<.
71D0:  26 A1 DC 89 8E 06 3E 0B  26 2B 06 9C 00 8E 06 3A   &.....>. &+.....:
71E0:  0B 26 A3 7E F0 8E 06 3E  0B 26 83 3E A8 00 00 74   .&.~...> .&.>...t
71F0:  03 E9 0F 00 8E 06 3A 0B  26 A1 7E F0 26 A3 8A F0   ......:. &.~.&...
7200:  E9 31 00 8E 06 3E 0B 26  A1 A6 00 3D 01 00 7C 03   .1...>.& ...=..|.
7210:  E9 03 00 B8 01 00 99 52  50 8E 06 3A 0B B8 E8 03   .......R P..:....
7220:  26 F7 2E 7E F0 52 50 9A  94 2A F2 0B 8E 06 3A 0B   &..~.RP. .*....:.
7230:  26 A3 8A F0 B8 E8 03 BA  00 00 52 50 B8 F0 15 BA   &....... ..RP....
7240:  00 00 52 50 8E 06 3A 0B  26 FF 36 4A F0 26 FF 36   ..RP..:. &.6J.&.6
7250:  48 F0 9A 2E 2B F2 0B B9  08 E3 BB 03 00 53 51 8E   H...+... .....SQ.
7260:  06 3C 0B 8B C8 26 A1 8C  89 8B DA 99 52 50 8B F1   .<...&.. ....RP..
7270:  8B FB 9A 2E 2B F2 0B B9  E9 CA BB 01 00 53 51 8E   ....+... .....SQ.
```

```
7280:  06 3C 0B 8B C8 26 A1 A0  89 8B DA 99 52 50 89 4E   .<...&.. ....RP.N
7290:  F4 89 5E F6 9A 2E 2B F2  0B 8E 06 3C 0B 8B C8 B8   ..^...+. ...<....
72A0:  38 6D 8B DA 26 F7 2E 96  89 03 C1 13 D3 03 46 F4   8m..&... ......F.
72B0:  13 56 F6 8B C8 B8 FA 3D  8B DA 26 F7 2E 98 89 2B   .V.....= ..&....+
72C0:  C8 1B DA 03 F1 13 FB 81  EE D9 C2 83 DF 36 57 56   ........ .....6WV
72D0:  9A 94 2A F2 0B 8E 06 3C  0B 26 A3 DC 89 26 83 3E   ..*....< .&...&.>
72E0:  E0 89 00 74 03 E9 2C 00  A1 56 01 26 39 06 DC 89   ...t..,. .V.&9...
72F0:  7F 03 E9 07 00 26 C7 06  E0 89 02 00 8E 06 3C 0B   .....&.. ......<.
7300:  A1 54 01 26 39 06 DC 89  7E 03 E9 07 00 26 C7 06   .T.&9... ~....&..
7310:  E0 89 FE FF 8E 06 3C 0B  26 A1 E0 89 E9 00 00 5E   ......<. &......^
7320:  5F 8B E5 5D CB 55 8B EC  81 EC 1E 00 57 56 B8 E8   _..].U.. ....WV..
7330:  03 BA 00 00 52 50 B8 3A  23 BA 00 00 52 50 8E 06   ....RP.: #...RP..
7340:  3A 0B 26 FF 36 4E F0 26  FF 36 4C F0 9A 2E 2B F2   :.&.6N.& .6L...+.
7350:  0B 8E 06 3C 0B 8B C8 B8  FE 5D 8B DA 26 F7 2E 9A   ...<.... .]..&...
7360:  89 03 C8 13 DA 81 E9 30  A9 83 DB 2F 53 51 9A 94   .......0 .../SQ..
7370:  2A F2 0B 8E 06 3C 0B 26  A3 DE 89 8E 06 36 0B 26   *....<.& .....6.&
7380:  83 3E 78 00 01 74 03 E9  0B 00 8E 06 3C 0B 26 A1   .>x..t.. ....<.&.
7390:  E0 89 E9 D9 02 8E 06 3E  0B 26 A1 9C 00 99 05 88   .......> .&......
73A0:  13 83 D2 00 52 50 8E 06  3A 0B B8 E8 03 26 F7 2E   ....RP.. :....&..
73B0:  7E F0 52 50 9A 2C 2A F2  0B 83 C4 04 52 50 9A 94   ~.RP.,*. ....RP..
73C0:  2A F2 0B 99 89 46 F2 89  56 F4 8E 06 3C 0B 26 A1   *....F.. V...<.&.
73D0:  DE 89 8E 06 3E 0B 26 2B  06 9E 00 8E 06 3A 0B 26   ....>.&+ .....:.&
73E0:  A3 80 F0 8E 06 3E 0B 26  A1 9E 00 99 05 88 13 83   .....>.& ........
73F0:  D2 00 52 50 8E 06 3A 0B  B8 E8 03 26 F7 2E 80 F0   ..RP..:. ...&....
7400:  52 50 9A 94 2A F2 0B 99  89 46 F6 89 56 F8 8E 06   RP..*... .F..V...
7410:  3E 0B 26 A1 90 00 8E 06  40 0B 26 2B 06 58 00 99   >.&..... @.&+.X..
7420:  52 50 B8 E8 03 BA 00 00  52 50 8E 06 3A 0B 26 FF   RP...... RP..:.&.
7430:  36 4E F0 26 FF 36 4C F0  9A 2E 2B F2 0B 52 50 9A   6N.&.6L. ..+..RP.
7440:  94 2A F2 0B 89 46 FA 89  56 FC 8E 06 3E 0B 26 83   .*...F.. V...>.&.
7450:  3E AA 00 00 74 03 E9 0F  00 8E 06 3A 0B 26 A1 80   >...t... ...:.&..
7460:  F0 26 A3 8C F0 E9 31 00  8E 06 3E 0B 26 A1 AA 00   .&....1. ..>.&...
7470:  3D 01 00 7C 03 E9 03 00  B8 01 00 99 52 50 8E 06   =..|.... ....RP..
7480:  3A 0B B8 E8 03 26 F7 2E  80 F0 52 50 9A 94 2A F2   :....&.. ..RP..*.
7490:  0B 8E 06 3A 0B 26 A3 8C  F0 B8 E8 03 BA 00 00 52   ...:.&.. .......R
74A0:  50 B8 E5 17 BA 00 00 52  50 FF 76 F4 FF 76 F2 9A   P......R P.v..v..
74B0:  2E 2B F2 0B B9 4B 1B BB  00 00 53 51 8E 06 3A 0B   .+...K.. ..SQ..:.
74C0:  26 FF 36 4A F0 26 FF 36  48 F0 8B F0 8B FA 9A 2E   &.6J.&.6 H.......
74D0:  2B F2 0B B9 31 02 BB 00  00 53 51 8E 06 3A 0B 26   +...1... .SQ..:.&
74E0:  FF 36 52 F0 26 FF 36 50  F0 89 46 EE 89 56 F0 9A   .6R.&.6P ..F..V..
74F0:  2E 2B F2 0B B9 BE AA BB  07 00 53 51 8E 06 3C 0B   .+...... ..SQ..<.
7500:  8B C8 26 A1 8C 89 8B DA  99 52 50 89 4E EA 89 5E   ..&..... .RP.N..^
7510:  EC 9A 2E 2B F2 0B B9 57  7C BB 01 00 53 51 8E 06   ...+...W |...SQ..
7520:  3C 0B 8B C8 26 A1 B2 89  8B DA 99 52 50 89 4E E6   <...&... ...RP.N.
7530:  89 5E E8 9A 2E 2B F2 0B  B9 A9 C2 BB 00 00 53 51   .^...+.. ......SQ
7540:  8E 06 3C 0B 8B C8 26 A1  98 89 8B DA 99 52 50 89   ..<...&. .....RP.
7550:  4E E2 89 5E E4 9A 2E 2B  F2 0B 8E 06 3E 0B 8B C8   N..^...+ ....>...
7560:  B8 DF 24 8B DA 26 F7 2E  B2 00 2B C1 1B D3 8E 06   ..$..&.. ..+.....
7570:  3C 0B 8B C8 B8 B8 35 8B  DA 26 F7 2E 92 89 03 C1   <.....5. .&......
7580:  13 D3 03 46 E2 13 56 E4  03 46 E6 13 56 E8 03 46   ...F..V. .F..V..F
7590:  EA 13 56 EC 03 46 EE 13  56 F0 2B C6 1B D7 2D 4E   ..V..F.. V.+...-N
75A0:  96 83 DA 3A 52 50 9A 94  2A F2 0B 8E 06 3C 0B 26   ...:RP.. *....<.&
75B0:  A3 DE 89 26 83 3E E0 89  00 74 03 E9 22 00 A1 58   ...&.>.. .t.."..X
75C0:  01 26 39 06 DE 89 7F 03  E9 0A 00 26 C7 06 E0 89   .&9..... ...&....
75D0:  03 00 E9 0B 00 8E 06 3C  0B 26 C7 06 E0 89 FD FF   .......< .&......
```

```
75E0:  83 3E 5C 01 01 74 03 E9  60 00 8E 06 3C 0B 26 83   .>\..t.. `...<.&.
75F0:  3E BA 89 00 7F 03 E9 51  00 C7 46 FE 00 00 A1 5A   >......Q ..F....Z
7600:  01 26 39 06 C6 89 7F 03  E9 03 00 FF 46 FE 8E 06   .&9..... ....F...
7610:  3C 0B A1 5A 01 26 39 06  D2 89 7F 03 E9 03 00 FF   <..Z.&9. ........
7620:  46 FE 8E 06 3C 0B A1 5A  01 26 39 06 DE 89 7F 03   F...<..Z .&9.....
7630:  E9 03 00 FF 46 FE 83 7E  FE 02 7D 03 E9 0B 00 8E   ....F..~ ..}.....
7640:  06 3C 0B 26 C7 06 E0 89  03 00 8E 06 3C 0B 26 A1   .<.&.... ....<.&.
7650:  E0 89 8E 06 3E 0B 26 2B  06 A0 00 8E 06 3A 0B 26   ....>.&+ .....:.&
7660:  A3 82 F0 8E 06 3C 0B 26  A1 E0 89 E9 00 00 5E 5F   .....<.& ......^_
7670:  8B E5 5D CB 55 8B EC 81  EC 1E 00 57 56 8E 06 3C   ..].U... ...WV..<
7680:  0B 26 C7 06 E0 89 00 00  26 83 3E 9C 89 01 7C 03   .&...... &.>...|.
7690:  E9 0D 00 26 C7 06 E0 89  FF FF B8 FF FF E9 B9 07   ...&.... ........
76A0:  B8 00 00 8E 06 3A 0B 26  A3 7C F0 8E 06 3C 0B 26   .....:.& .|...<.&
76B0:  A3 DA 89 B8 E8 03 BA 00  00 52 50 B8 B3 15 BA 00   ........ .RP.....
76C0:  00 52 50 8E 06 3A 0B 26  FF 36 4E F0 26 FF 36 4C   .RP..:.& .6N.&.6L
76D0:  F0 9A 2E 2B F2 0B B9 25  09 BB 00 00 53 51 8E 06   ...+...% ....SQ..
76E0:  3A 0B 26 FF 36 4A F0 26  FF 36 48 F0 8B F0 8B FA   :.&.6J.& .6H.....
76F0:  9A 2E 2B F2 0B B9 49 98  BB 00 00 53 51 8E 06 3C   ..+...I. ...SQ..<
7700:  0B 8B C8 26 A1 94 89 8B  DA 99 52 50 89 4E EE 89   ...&.... ..RP.N..
7710:  5E F0 9A 2E 2B F2 0B B9  75 24 BB 08 00 53 51 8E   ^...+... u$...SQ.
7720:  06 3C 0B 8B C8 26 A1 9C  89 8B DA 99 52 50 89 4E   .<...&.. ....RP.N
7730:  EA 89 5E EC 9A 2E 2B F2  0B 8E 06 3C 0B 8B C8 B8   ..^...+. ...<....
7740:  69 09 8B DA 26 F7 2E 98  89 89 46 E6 89 56 E8 B8   i...&... ..F..V..
7750:  77 F1 26 F7 2E 92 89 2B  46 E6 1B 56 E8 03 C8 13   w.&....+ F..V....
7760:  DA 03 4E EA 13 5E EC 03  4E EE 13 5E F0 03 F1 13   ..N..^.. N..^....
7770:  FB 81 EE 43 5E 83 DF 34  57 56 9A 94 2A F2 0B 8E   ...C^..4 WV..*...
7780:  06 3C 0B 26 A3 DC 89 8E  06 36 0B 26 83 3E 78 00   .<.&.... .6.&.>x.
7790:  01 74 03 E9 3C 00 8E 06  3C 0B 26 A1 DC 89 26 A3   .t..<... <.&...&.
77A0:  D6 89 A1 4A 01 26 39 06  D6 89 7F 03 E9 0A 00 26   ...J.&9. .......&
77B0:  C7 06 E0 89 02 00 E9 0B  00 8E 06 3C 0B 26 C7 06   ........ ...<.&..
77C0:  E0 89 FE FF 8E 06 3C 0B  26 A1 E0 89 E9 8A 06 E9   ......<. &.......
77D0:  68 00 8E 06 3C 0B 26 A1  DC 89 8E 06 3E 0B 26 2B   h...<.&. ....>.&+
77E0:  06 9C 00 8E 06 3A 0B 26  A3 7E F0 8E 06 3E 0B 26   .....:.& .~...>.&
77F0:  83 3E A8 00 00 74 03 E9  0F 00 8E 06 3A 0B 26 A1   .>...t.. ....:.&.
7800:  7E F0 26 A3 8A F0 E9 31  00 8E 06 3E 0B 26 A1 A6   ~.&....1 ...>.&..
7810:  00 3D 01 00 7C 03 E9 03  00 B8 01 00 99 52 50 8E   .=..|... .....RP.
7820:  06 3A 0B B8 E8 03 26 F7  2E 7E F0 52 50 9A 94 2A   .:....&. .~.RP..*
7830:  F2 0B 8E 06 3A 0B 26 A3  8A F0 B8 E8 03 BA 00 00   ....:.&. ........
7840:  52 50 B8 3A 23 BA 00 00  52 50 8E 06 3A 0B 26 FF   RP.:#... RP..:.&.
7850:  36 4E F0 26 FF 36 4C F0  9A 2E 2B F2 0B 8E 06 3C   6N.&.6L. ..+....<
7860:  0B 8B C8 B8 FE 5D 8B DA  26 F7 2E 9A 89 03 C8 13   .....].. &.......
7870:  DA 81 E9 30 A9 83 DB 2F  53 51 9A 94 2A F2 0B 8E   ...0.../ SQ..*...
7880:  06 3C 0B 26 A3 DE 89 8E  06 36 0B 26 83 3E 78 00   .<.&.... .6.&.>x.
7890:  01 74 03 E9 0B 00 8E 06  3C 0B 26 A1 E0 89 E9 B8   .t...... <.&.....
78A0:  05 8E 06 3E 0B 26 A1 90  00 8E 06 40 0B 26 2B 06   ...>.&.. ...@.&+.
78B0:  58 00 99 52 50 B8 E8 03  BA 00 00 52 50 8E 06 3A   X..RP... ...RP..:
78C0:  0B 26 FF 36 4E F0 26 FF  36 4C F0 9A 2E 2B F2 0B   .&.6N.&. 6L...+..
78D0:  52 50 9A 94 2A F2 0B 89  46 FA 89 56 FC 8E 06 3E   RP..*... F..V...>
78E0:  0B 26 A1 9C 00 99 05 88  13 83 D2 00 52 50 8E 06   .&...... ....RP..
78F0:  3A 0B B8 E8 03 26 F7 2E  7E F0 52 50 9A 2C 2A F2   :....&.. ~.RP.,*.
7900:  0B 83 C4 04 52 50 9A 94  2A F2 0B 99 89 46 F2 89   ....RP.. *....F..
7910:  56 F4 8E 06 3C 0B 26 A1  DE 89 8E 06 3E 0B 26 2B   V...<.&. ....>.&+
7920:  06 9E 00 8E 06 3A 0B 26  A3 80 F0 8E 06 3E 0B 26   .....:.& .....>.&
7930:  A1 9E 00 99 05 88 13 83  D2 00 52 50 8E 06 3A 0B   ........ ..RP..:.
```

```
7940:  B8 E8 03 26 F7 2E 80 F0  52 50 9A 94 2A F2 0B 99   ...&.... RP..*...
7950:  89 46 F6 89 56 F8 8E 06  3C 0B 26 83 3E 9C 89 03   .F..V... <.&.>...
7960:  74 03 E9 C7 00 B8 E8 03  BA 00 00 52 50 B8 E9 15   t....... ...RP...
7970:  BA 00 00 52 50 8E 06 3A  0B 26 FF 36 72 F0 26 FF   ...RP..: .&.6r.&.
7980:  36 70 F0 9A 2E 2B F2 0B  B9 7E 03 BB 00 00 53 51   6p...+.. .~....SQ
7990:  8E 06 3A 0B 26 FF 36 52  F0 26 FF 36 50 F0 8B F0   ..:.&.6R .&.6P...
79A0:  8B FA 9A 2E 2B F2 0B B9  A7 66 BB 03 00 53 51 8E   ....+... .f...SQ.
79B0:  06 3C 0B 8B C8 26 A1 AC  89 8B DA 99 52 50 89 4E   .<...&.. ....RP.N
79C0:  E6 89 5E E8 9A 2E 2B F2  0B B9 FA 00 BB 01 00 53   ..^...+. .......S
79D0:  51 8E 06 3C 0B 8B C8 26  A1 A2 89 8B DA 99 52 50   Q..<...& ......RP
79E0:  89 4E EA 89 5E EC 9A 2E  2B F2 0B 03 46 EA 13 56   .N..^... +...F..V
79F0:  EC 03 46 E6 13 56 E8 03  F0 13 FA 81 EE CB 86 83   ..F..V.. ........
7A00:  DF 36 57 56 9A 94 2A F2  0B 8E 06 3C 0B 26 A3 D8   .6WV..*. ...<.&..
7A10:  89 A1 52 01 26 39 06 D8  89 7F 03 E9 0E 00 26 C7   ..R.&9.. ......&.
7A20:  06 E0 89 01 00 26 A1 E0  89 E9 2D 04 8E 06 3C 0B   .....&.. ..-...<.
7A30:  26 83 3E 9C 89 01 74 03  E9 4A 01 B8 E8 03 BA 00   &.>...t. .J......
7A40:  00 52 50 B8 68 15 BA 00  00 52 50 8E 06 3A 0B 26   .RP.h... .RP..:.&
7A50:  FF 36 4E F0 26 FF 36 4C  F0 9A 2E 2B F2 0B B9 C2   .6N.&.6L ...+....
7A60:  C3 BB 00 00 53 51 8E 06  3C 0B 8B C8 26 A1 96 89   ....SQ.. <...&...
7A70:  8B DA 99 52 50 8B F1 8B  FB 9A 2E 2B F2 0B B9 C3   ...RP... ...+....
7A80:  B4 BB 00 00 53 51 8E 06  3C 0B 8B C8 26 A1 8C 89   ....SQ.. <...&...
7A90:  8B DA 99 52 50 89 4E E6  89 5E E8 9A 2E 2B F2 0B   ...RP.N. .^...+..
7AA0:  B9 D2 11 BB 00 00 53 51  8E 06 3A 0B 26 FF 36 4A   ......SQ ..:.&.6J
7AB0:  F0 26 FF 36 48 F0 89 46  EA 89 56 EC 9A 2E 2B F2   .&.6H..F ..V...+.
7AC0:  0B B9 05 6B BB 03 00 53  51 8E 06 3C 0B 8B C8 26   ...k...S Q..<...&
7AD0:  A1 AE 89 8B DA 99 52 50  89 4E EE 89 5E F0 9A 2E   ......RP .N..^...
7AE0:  2B F2 0B B9 93 0A BB 06  00 53 51 8E 06 3C 0B 8B   +....... .SQ..<..
7AF0:  C8 26 A1 AC 89 8B DA 99  52 50 89 4E E2 89 5E E4   .&...... RP.N..^.
7B00:  9A 2E 2B F2 0B 8E 06 3C  0B 8B C8 B8 82 6B 8B DA   ..+....< .....k..
7B10:  26 F7 2E B2 89 03 C8 13  DA 03 4E E2 13 5E E4 03   &....... ..N..^..
7B20:  4E EE 13 5E F0 03 4E EA  13 5E EC 03 4E E6 13 5E   N..^..N. .^..N..^
7B30:  E8 03 F1 13 FB 81 EE AA  9F 83 DF 27 57 56 9A 94   ........ ...'WV..
7B40:  2A F2 0B 8E 06 3C 0B 26  A3 D8 89 A1 50 01 26 39   *....<.& ....P.&9
7B50:  06 D8 89 7F 03 E9 0E 00  26 C7 06 E0 89 01 00 26   ........ &......&
7B60:  A1 E0 89 E9 F3 02 8E 06  3C 0B A1 4E 01 26 39 06   ........ <..N.&9.
7B70:  D8 89 7C 03 E9 0E 00 26  C7 06 E0 89 FF FF 26 A1   ..|....& ......&.
7B80:  E0 89 E9 D4 02 B8 E8 03  BA 00 00 52 50 B8 3B 18   ........ ...RP.;.
7B90:  BA 00 00 52 50 8E 06 3A  0B 26 FF 36 4A F0 26 FF   ...RP..: .&.6J.&.
7BA0:  36 48 F0 9A 2E 2B F2 0B  B9 15 18 BB 00 00 53 51   6H...+.. ......SQ
7BB0:  8E 06 3A 0B 26 FF 36 4E  F0 26 FF 36 4C F0 8B F0   ..:.&.6N .&.6L...
7BC0:  8B FA 9A 2E 2B F2 0B B9  BE 4A BB 05 00 53 51 8E   ....+... .J...SQ.
7BD0:  06 3C 0B 8B C8 26 A1 9C  89 8B DA 99 52 50 89 4E   .<...&.. ....RP.N
7BE0:  E2 89 5E E4 9A 2E 2B F2  0B B9 20 84 BB 01 00 53   ..^...+. .. ....S
7BF0:  51 8E 06 3C 0B 8B C8 26  A1 8C 89 8B DA 99 52 50   Q..<...& ......RP
7C00:  89 4E E6 89 5E E8 9A 2E  2B F2 0B B9 BE FD BB 01   .N..^... +.......
7C10:  00 53 51 8E 06 3C 0B 8B  C8 26 A1 A2 89 8B DA 99   .SQ..<.. .&......
7C20:  52 50 89 4E EA 89 5E EC  9A 2E 2B F2 0B 03 46 EA   RP.N..^. ..+...F.
7C30:  13 56 EC 8E 06 3C 0B 8B  C8 B8 90 0F 8B DA 26 F7   .V...<.. ......&.
7C40:  2E 98 89 2B C8 1B DA 03  4E E6 13 5E E8 B8 5B 2E   ...+.... N..^..[.
7C50:  26 F7 2E 96 89 03 C1 13  D3 03 46 E2 13 56 E4 03   &....... ..F..V..
7C60:  F0 13 FA 81 EE E1 75 83  DF 3B 57 56 9A 94 2A F2   ......u. .;WV..*.
7C70:  0B 8E 06 3C 0B 26 A3 DC  89 A1 56 01 26 39 06 DC   ...<.&.. ..V.&9..
7C80:  89 7F 03 E9 0E 00 26 C7  06 E0 89 02 00 26 A1 E0   ......&. .....&..
7C90:  89 E9 C5 01 8E 06 3C 0B  A1 54 01 26 39 06 DC 89   ......<. .T.&9...
```

ENROLL.DMP Thursday, January 6, 1994 12:03pm Page 38


```
7CA0:  7C 03 E9 0E 00 26 C7 06  E0 89 FE FF 26 A1 E0 89   |....&.. ....&...
7CB0:  E9 A6 01 B8 E8 03 BA 00  00 52 50 B8 E1 03 BA 00   ........ .RP.....
7CC0:  00 52 50 FF 76 FC FF 76  FA 9A 2E 2B F2 0B B9 CF   .RP.v..v ...+....
7CD0:  9D BB 01 00 53 51 8E 06  3A 0B 26 FF 36 56 F0 26   ....SQ.. :.&.6V.&
7CE0:  FF 36 54 F0 8B F0 8B FA  9A 2E 2B F2 0B B9 27 22   .6T..... ..+...'"
7CF0:  BB 00 00 53 51 8E 06 3A  0B 26 FF 36 4A F0 26 FF   ...SQ..: .&.6J.&.
7D00:  36 48 F0 89 46 E2 89 56  E4 9A 2E 2B F2 0B B9 9E   6H..F..V ...+....
7D10:  2E BB 05 00 53 51 8E 06  3C 0B 8B C8 26 A1 8C 89   ....SQ.. <...&...
7D20:  8B DA 99 52 50 89 4E E6  89 5E E8 9A 2E 2B F2 0B   ...RP.N. .^...+..
7D30:  8E 06 3C 0B 8B C8 B8 E8  1D 8B DA 26 F7 2E 90 89   ..<..... ...&....
7D40:  89 46 EA 89 56 EC B8 16  C5 26 F7 2E 98 89 2B 46   .F..V... .&....+F
7D50:  EA 1B 56 EC 03 C8 13 DA  8E 06 3E 0B B8 83 6E 26   ..V..... ..>...n&
7D60:  F7 2E B2 00 03 C8 13 DA  8E 06 3C 0B B8 0F 07 26   ........ ..<....&
7D70:  F7 2E A8 89 03 C1 13 D3  03 46 E6 13 56 E8 03 46   ........ .F..V..F
7D80:  E2 13 56 E4 03 F0 13 FA  81 EE 93 F0 83 DF 6E 57   ..V..... ......nW
7D90:  56 9A 94 2A F2 0B 8E 06  3C 0B 26 A3 DE 89 26 83   V..*.... <.&...&.
7DA0:  3E E0 89 00 74 03 E9 22  00 A1 58 01 26 39 06 DE   >...t.." ..X.&9..
7DB0:  89 7F 03 E9 0A 00 26 C7  06 E0 89 03 00 E9 0B 00   ......&. ........
7DC0:  8E 06 3C 0B 26 C7 06 E0  89 FD FF 83 3E 5C 01 01   ..<.&... ....>\..
7DD0:  74 03 E9 60 00 8E 06 3C  0B 26 83 3E BA 89 00 7F   t..`...< .&.>....
7DE0:  03 E9 51 00 C7 46 FE 00  00 A1 5A 01 26 39 06 C6   ..Q..F.. ..Z.&9..
7DF0:  89 7F 03 E9 03 00 FF 46  FE 8E 06 3C 0B A1 5A 01   .......F ...<..Z.
7E00:  26 39 06 D2 89 7F 03 E9  03 00 FF 46 FE 8E 06 3C   &9...... ...F...<
7E10:  0B A1 5A 01 26 39 06 DE  89 7F 03 E9 03 00 FF 46   ..Z.&9.. .......F
7E20:  FE 83 7E FE 02 7D 03 E9  0B 00 8E 06 3C 0B 26 C7   ..~..}.. ....<.&.
7E30:  06 E0 89 03 00 8E 06 3C  0B 26 A1 E0 89 8E 06 3E   .......< .&.....>
7E40:  0B 26 2B 06 A0 00 8E 06  3A 0B 26 A3 82 F0 8E 06   .&+..... :.&.....
7E50:  3C 0B 26 A1 E0 89 E9 00  00 5E 5F 8B E5 5D CB 55   <.&..... .^_..].U
7E60:  8B EC 81 EC 00 00 57 56  8E 06 42 0B 26 A1 E6 89   ......WV ..B.&...
7E70:  26 2B 06 E4 89 8E 06 44  0B 26 A3 3E 88 8E 06 3E   &+.....D .&.>...>
7E80:  0B 26 A1 90 00 26 2B 06  8E 00 8E 06 40 0B 26 A3   .&...&+. ....@.&.
7E90:  5E 00 8E 06 44 0B 26 A1  32 88 26 8B 0E 3E 88 83   ^...D.&. 2.&..>..
7EA0:  F9 01 7C 03 E9 03 00 B9  01 00 99 F7 F9 26 A3 3C   ..|..... .....&.<
7EB0:  88 8E 06 40 0B 26 A1 52  00 26 8B 0E 5E 00 83 F9   ...@.&.R .&..^...
7EC0:  01 7C 03 E9 03 00 B9 01  00 99 F7 F9 26 A3 5C 00   .|...... ....&.\.
7ED0:  B8 FF FF BA FF FF 8E 06  3A 0B 26 A3 3C F0 26 89   ........ :.&.<.&.
7EE0:  16 3E F0 26 A3 34 F0 26  89 16 36 F0 B8 FF FF BA   .>.&.4.& ..6.....
7EF0:  FF FF 26 A3 40 F0 26 89  16 42 F0 26 A3 38 F0 26   ..&.@.&. .B.&.8.&
7F00:  89 16 3A F0 8E 06 3E 0B  26 A1 90 00 8E 06 42 0B   ..:...>. &.....B.
7F10:  26 03 06 E6 89 99 52 50  26 A1 E6 89 8E 06 3E 0B   &.....RP &.....>.
7F20:  26 2B 06 90 00 50 9A 1E  2A F2 0B 83 C4 02 B9 D0   &+...P.. *.......
7F30:  07 F7 E9 52 50 9A 94 2A  F2 0B 8E 06 3A 0B 26 A3   ...RP..* ....:.&.
7F40:  08 F0 26 89 16 0A F0 8E  06 3E 0B 26 A1 8E 00 8E   ..&..... .>.&....
7F50:  06 42 0B 26 03 06 E4 89  99 52 50 26 A1 E4 89 8E   .B.&.... .RP&....
7F60:  06 3E 0B 26 2B 06 8E 00  50 9A 1E 2A F2 0B 83 C4   .>.&+... P..*....
7F70:  02 B9 D0 07 F7 E9 52 50  9A 94 2A F2 0B 8E 06 3A   ......RP ..*....:
7F80:  0B 26 A3 0C F0 26 89 16  0E F0 8E 06 40 0B 26 A1   .&...&.. ....@.&.
7F90:  52 00 8E 06 44 0B 26 03  06 32 88 50 9A 1E 2A F2   R...D.&. .2.P..*.
7FA0:  0B 83 C4 02 99 52 50 8E  06 44 0B 26 A1 32 88 8C   .....RP. .D.&.2..
7FB0:  C1 8E 06 40 0B 26 2B 06  52 00 50 9A 1E 2A F2 0B   ...@.&+. R.P..*..
7FC0:  83 C4 02 B9 D0 07 F7 E9  52 50 9A 94 2A F2 0B 8E   ........ RP..*...
7FD0:  06 3A 0B 26 A3 10 F0 26  89 16 12 F0 8E 06 40 0B   .:.&...& ......@.
7FE0:  26 A1 56 00 8E 06 44 0B  26 03 06 36 88 99 52 50   &.V...D. &..6..RP
7FF0:  26 A1 36 88 8E 06 40 0B  26 2B 06 56 00 50 9A 1E   &.6...@. &+.V.P..
```

```
8000: 2A F2 0B 83 C4 02 B9 D0  07 F7 E9 52 50 9A 94 2A  *....... ...RP..*
8010: F2 0B 8E 06 3A 0B 26 A3  1C F0 26 89 16 1E F0 8E  ....:.&. ..&.....
8020: 06 40 0B 26 A1 58 00 8E  06 44 0B 26 03 06 38 88  .@.&.X.. .D.&..8.
8030: 3D 01 00 7C 03 E9 03 00  B8 01 00 99 52 50 26 A1  =..|.... ....RP&.
8040: 38 88 8E 06 40 0B 26 2B  06 58 00 50 9A 1E 2A F2  8...@.&+ .X.P..*.
8050: 0B 83 C4 02 B9 D0 07 F7  E9 52 50 9A 94 2A F2 0B  ........ .RP..*..
8060: 8E 06 3A 0B 26 A3 20 F0  26 89 16 22 F0 8E 06 40  ..:.&. . &.."...@
8070: 0B 26 A1 54 00 8E 06 44  0B 26 03 06 34 88 3D 01  .&.T...D .&..4.=.
8080: 00 7C 03 E9 03 00 B8 01  00 99 52 50 26 A1 34 88  .|...... ..RP&.4.
8090: 8E 06 40 0B 26 2B 06 54  00 50 9A 1E 2A F2 0B 83  ..@.&+.T .P..*...
80A0: C4 02 B9 D0 07 F7 E9 52  50 9A 94 2A F2 0B 8E 06  .......R P..*....
80B0: 3A 0B 26 A3 18 F0 26 89  16 1A F0 8E 06 40 0B 26  :.&...&. .....@.&
80C0: A1 5C 00 8E 06 44 0B 26  03 06 3C 88 99 52 50 26  .\...D.& ..<..RP&
80D0: A1 3C 88 8E 06 40 0B 26  2B 06 5C 00 50 9A 1E 2A  .<...@.& +.\.P..*
80E0: F2 0B 83 C4 02 B9 D0 07  F7 E9 52 50 9A 94 2A F2  ........ ..RP..*.
80F0: 0B 8E 06 3A 0B 26 A3 24  F0 26 89 16 26 F0 8E 06  ...:.&.$ .&..&...
8100: 3E 0B 26 A1 92 00 8E 06  42 0B 26 03 06 E8 89 3D  >.&..... B.&....=
8110: 01 00 7C 03 E9 03 00 B8  01 00 99 52 50 26 A1 E8  ..|..... ...RP&..
8120: 89 8E 06 3E 0B 26 2B 06  92 00 50 9A 1E 2A F2 0B  ...>.&+. ..P..*..
8130: 83 C4 02 B9 D0 07 F7 E9  52 50 9A 94 2A F2 0B 8E  ........ RP..*...
8140: 06 3A 0B 26 A3 2C F0 26  89 16 2E F0 8E 06 3E 0B  .:.&.,.& ......>.
8150: 26 A1 92 00 8E 06 42 0B  26 03 06 E8 89 3D 01 00  &.....B. &....=..
8160: 7C 03 E9 03 00 B8 01 00  99 52 50 26 A1 EA 89 8E  |....... .RP&....
8170: 06 3E 0B 26 2B 06 94 00  50 9A 1E 2A F2 0B 83 C4  .>.&+... P..*....
8180: 02 B9 D0 07 F7 E9 52 50  9A 94 2A F2 0B 8E 06 3A  ......RP ..*....:
8190: 0B 26 A3 30 F0 26 89 16  32 F0 8E 06 40 0B 26 A1  .&.0.&.. 2...@.&.
81A0: 52 00 99 52 50 8E 06 3E  0B B8 E8 03 26 F7 2E B2  R..RP..> ....&...
81B0: 00 52 50 9A 94 2A F2 0B  8E 06 44 0B 8B C8 26 A1  .RP..*.. ..D...&.
81C0: 32 88 8B DA 99 52 50 8E  06 42 0B B8 E8 03 26 F7  2....RP. .B....&.
81D0: 2E 08 8A 52 50 8B F1 8B  FB 9A 94 2A F2 0B 2B C6  ...RP... ...*..+.
81E0: 1B D7 52 50 9A 2C 2A F2  0B 83 C4 04 8E 06 3A 0B  ..RP.,*. ......:.
81F0: 26 A3 54 F0 26 89 16 56  F0 5E 5F 8B E5 5D CB 55  &.T.&..V .^_..].U
8200: 8B EC 81 EC 00 00 57 56  8E 06 42 0B 26 A1 E6 89  ......WV ..B.&...
8210: 26 2B 06 E4 89 8E 06 44  0B 26 A3 3E 88 8E 06 3E  &+.....D .&.>...>
8220: 0B 26 A1 90 00 26 2B 06  8E 00 8E 06 40 0B 26 A3  .&...&+. ....@.&.
8230: 5E 00 8E 06 3C 0B 26 83  3E 94 89 00 75 03 E9 63  ^...<.&. >...u..c
8240: 00 26 A1 8E 89 3D 01 00  7C 03 E9 03 00 B8 01 00  .&...=.. |.......
8250: 99 52 50 B8 D0 07 26 F7  2E 9A 89 52 50 9A 94 2A  .RP...&. ...RP..*
8260: F2 0B 8E 06 3A 0B 26 A3  44 F0 26 89 16 46 F0 8E  ....:.&. D.&..F..
8270: 06 3C 0B 26 A1 8E 89 3D  01 00 7C 03 E9 03 00 B8  .<.&...= ..|.....
8280: 01 00 99 52 50 B8 E8 03  26 F7 2E 96 89 52 50 9A  ...RP... &....RP.
8290: 94 2A F2 0B 8E 06 3A 0B  26 A3 48 F0 26 89 16 4A  .*....:. &.H.&..J
82A0: F0 E9 1C 00 B8 00 00 BA  00 00 8E 06 3A 0B 26 A3  ........ ....:.&.
82B0: 48 F0 26 89 16 4A F0 26  A3 44 F0 26 89 16 46 F0  H.&..J.& .D.&..F.
82C0: 5E 5F 8B E5 5D CB 55 8B  EC 81 EC 00 00 57 56 8E  ^_..].U. .....WV.
82D0: 06 3C 0B 26 A1 A6 89 26  8B 0E A0 89 83 F9 01 7C  .<.&...& .......|
82E0: 03 E9 03 00 B9 01 00 99  F7 F9 99 8E 06 3A 0B 26  ........ .....:.&
82F0: A3 70 F0 26 89 16 72 F0  8E 06 3C 0B 26 A1 A8 89  .p.&..r. ..<.&...
8300: 26 8B 0E A2 89 83 F9 01  7C 03 E9 03 00 B9 01 00  &....... |.......
8310: 99 F7 F9 99 8E 06 3A 0B  26 A3 74 F0 26 89 16 76  ......:. &.t.&..v
8320: F0 8E 06 40 0B 26 A1 5E  00 8E 06 44 0B 26 03 06  ...@.&.^ ...D.&..
8330: 3E 88 3D 01 00 7C 03 E9  03 00 B8 01 00 99 52 50  >.=..|.. ......RP
8340: 8E 06 3C 0B B8 D0 07 26  F7 2E A0 89 52 50 9A 94  ..<....& ....RP..
8350: 2A F2 0B 8E 06 3A 0B 26  A3 5C F0 26 89 16 5E F0  *....:.& .\.&..^.
```

```
8360:  8E 06 40 0B 26 A1 56 00  8E 06 44 0B 26 03 06 36   ..@.&.V. ..D.&..6
8370:  88 3D 01 00 7C 03 E9 03  00 B8 01 00 99 52 50 8E   .=..|... .....RP.
8380:  06 3C 0B B8 D0 07 26 F7  2E A2 89 52 50 9A 94 2A   .<....&. ...RP..*
8390:  F2 0B 8E 06 3A 0B 26 A3  60 F0 26 89 16 62 F0 8E   ....:.&. `.&..b..
83A0:  06 40 0B 26 A1 54 00 8E  06 44 0B 26 03 06 34 88   .@.&.T.. .D.&..4.
83B0:  3D 01 00 7C 03 E9 03 00  B8 01 00 99 52 50 8E 06   =..|.... ....RP..
83C0:  3C 0B B8 D0 07 26 F7 2E  A4 89 52 50 9A 94 2A F2   <....&.. ..RP..*.
83D0:  0B 8E 06 3A 0B 26 A3 64  F0 26 89 16 66 F0 8E 06   ...:.&.d .&..f...
83E0:  40 0B 26 A1 52 00 8E 06  44 0B 26 03 06 32 88 3D   @.&.R... D.&..2.=
83F0:  01 00 7C 03 E9 03 00 B8  01 00 99 52 50 8E 06 3C   ..|..... ...RP..<
8400:  0B B8 D0 07 26 F7 2E A6  89 52 50 9A 94 2A F2 0B   ....&... .RP..*..
8410:  8E 06 3A 0B 26 A3 68 F0  26 89 16 6A F0 5E 5F 8B   ..:.&.h. &..j.^_.
8420:  E5 5D CB 55 8B EC 81 EC  02 00 57 56 C7 46 FE 00   .].U.... ..WV.F..
8430:  00 E9 03 00 FF 46 FE 83  7E FE 06 7C 03 E9 5A 00   .....F.. ~..|..Z.
8440:  8E 06 46 0B 8B 5E FE D1  E3 26 8B 87 44 00 8E 06   ..F..^.. .&..D...
8450:  48 0B 8B 5E FE D1 E3 26  03 87 2C 00 3D 01 00 7C   H..^...& ..,.=..|
8460:  03 E9 03 00 B8 01 00 99  52 50 8E 06 4A 0B 8B 5E   ........ RP..J..^
8470:  FE D1 E3 B8 D0 07 26 F7  AF CE F9 52 50 9A 94 2A   ......&. ...RP..*
8480:  F2 0B 8E 06 4C 0B 8B 5E  FE D1 E3 D1 E3 26 89 87   ....L..^ .....&..
8490:  C6 F8 26 89 97 C8 F8 E9  9A FF 8E 06 40 0B 26 A1   ..&..... ....@.&.
84A0:  50 00 8E 06 44 0B 26 03  06 30 88 3D 01 00 7C 03   P...D.&. .0.=..|.
84B0:  E9 03 00 B8 01 00 99 52  50 8E 06 3C 0B B8 D0 07   .......R P..<....
84C0:  26 F7 2E B6 89 52 50 9A  94 2A F2 0B 8E 06 3A 0B   &....RP. .*....:.
84D0:  26 A3 4C F0 26 89 16 4E  F0 B8 06 00 50 B8 38 00   &.L.&..N ....P.8.
84E0:  B9 AE 0E 51 50 BA CE F9  BB AE 0E 53 52 9A F9 1A   ...QP... ...SR...
84F0:  99 06 83 C4 0A 8E 06 4E  0B 26 8B 1E 3A 00 8E 06   .......N .&..:...
8500:  4A 0B D1 E3 26 8B 87 CE  F9 8E 06 4E 0B 26 8B 1E   J...&... ...N.&..
8510:  3C 00 D1 E3 8E 06 4A 0B  26 03 87 CE F9 8E 06 4E   <.....J. &......N
8520:  0B 26 8B 1E 38 00 D1 E3  8E 06 4A 0B 26 03 87 CE   .&..8... ..J.&...
8530:  F9 99 8E 06 3A 0B 26 A3  6C F0 26 89 16 6E F0 8E   ....:.&. l.&..n..
8540:  06 4E 0B 26 8B 1E 3A 00  8E 06 46 0B D1 E3 26 8B   .N.&..:. ..F...&.
8550:  87 44 00 8E 06 4E 0B 26  8B 1E 3C 00 D1 E3 8E 06   .D...N.& ..<.....
8560:  46 0B 26 03 87 44 00 8E  06 4E 0B 26 8B 1E 38 00   F.&..D.. .N.&..8.
8570:  D1 E3 8E 06 46 0B 26 03  87 44 00 8E 06 4E 0B 26   ....F.&. .D...N.&
8580:  8B 1E 3C 00 8E 06 48 0B  D1 E3 26 03 87 2C 00 8E   ..<...H. ..&..,..
8590:  06 4E 0B 26 8B 1E 3A 00  D1 E3 8E 06 48 0B 26 03   .N.&..:. ....H.&.
85A0:  87 2C 00 8E 06 4E 0B 26  8B 1E 38 00 D1 E3 8E 06   .,...N.& ..8.....
85B0:  48 0B 26 03 87 2C 00 3D  01 00 7C 03 E9 03 00 B8   H.&..,.= ..|.....
85C0:  01 00 99 52 50 B8 E0 2E  BA 00 00 52 50 8E 06 3A   ...RP... ...RP..:
85D0:  0B 26 FF 36 6E F0 26 FF  36 6C F0 9A 2E 2B F2 0B   .&.6n.&. 6l...+..
85E0:  52 50 9A 94 2A F2 0B 8E  06 3A 0B 26 A3 50 F0 26   RP..*... .:.&.P.&
85F0:  89 16 52 F0 B8 E8 03 BA  00 00 52 50 26 FF 36 52   ..R..... ..RP&.6R
8600:  F0 26 FF 36 50 F0 26 FF  36 6E F0 26 FF 36 6C F0   .&.6P.&. 6n.&.6l.
8610:  9A 2E 2B F2 0B 52 50 9A  94 2A F2 0B 8E 06 3A 0B   ..+..RP. .*....:.
8620:  26 A3 58 F0 26 89 16 5A  F0 5E 5F 8B E5 5D CB 55   &.X.&..Z .^_..].U
8630:  8B EC 81 EC 06 00 57 56  C7 46 FE 00 00 C7 46 FC   ......WV .F....F.
8640:  00 00 E9 03 00 FF 46 FC  8B 46 0A 39 46 FC 7C 03   ......F. .F.9F.|.
8650:  E9 2A 00 8B 5E FC D1 E3  C4 76 06 8B 46 FE 26 39   .*..^... .v..F.&9
8660:  00 7F 03 E9 14 00 8B 5E  FC D1 E3 C4 76 06 26 8B   .......^ ....v.&.
8670:  00 89 46 FE 8B 46 FC 89  46 FA E9 C8 FF 8B 46 FC   ..F..F.. F.....F.
8680:  E9 00 00 5E 5F 8B E5 5D  CB 55 8B EC 81 EC 06 00   ...^_..] .U......
8690:  57 56 C7 46 FC 00 00 E9  03 00 FF 46 FC 8B 46 0E   WV.F.... ...F..F.
86A0:  39 46 FC 7C 03 E9 11 00  8B 5E FC D1 E3 C4 76 0A   9F.|.... .^....v.
86B0:  8B 46 FC 26 89 00 E9 E1  FF C7 46 FC 00 00 E9 03   .F.&.... ..F.....
```

```
86C0:  00 FF 46 FC 8B 46 0E 48  3B 46 FC 7F 03 E9 7B 00   ..F..F.H ;F....{.
86D0:  8B 46 FC 40 89 46 FA E9  03 00 FF 46 FA 8B 46 0E   .F.@.F.. ...F..F.
86E0:  39 46 FA 7C 03 E9 60 00  8B 5E FC D1 E3 C4 76 0A   9F.|..`. .^....v.
86F0:  26 8B 18 D1 E3 C4 76 06  26 8B 00 8B 5E FA D1 E3   &.....v. &...^...
8700:  C4 76 0A 26 8B 18 D1 E3  C4 76 06 26 39 00 7F 03   .v.&.... .v.&9...
8710:  E9 32 00 8B 5E FC D1 E3  C4 76 0A 26 8B 00 89 46   .2..^... .v.&...F
8720:  FE 8B 5E FA D1 E3 C4 76  0A 26 8B 00 8B 5E FC D1   ..^....v .&...^..
8730:  E3 C4 76 0A 26 89 00 8B  5E FA D1 E3 C4 76 0A 8B   ..v.&... ^....v..
8740:  46 FE 26 89 00 E9 92 FF  E9 76 FF 5E 5F 8B E5 5D   F.&..... .v.^_..]
8750:  CB 00 55 8B EC 81 EC 00  00 57 56 5E 5F 8B E5 5D   ..U..... .WV^_..]
8760:  CB 00 55 8B EC 81 EC 00  00 57 56 83 7E 06 00 7C   ..U..... .WV.~..|
8770:  03 E9 05 00 81 46 06 68  01 83 7E 06 5A 7E 03 E9   .....F.h ..~.Z~..
8780:  18 00 83 7E 06 00 7D 03  E9 0F 00 8B 5E 06 D1 E3   ...~..}. ....^...
8790:  8B 87 DC 03 E9 5E 00 E9  5B 00 81 7E 06 B4 00 7E   .....^.. [..~...~
87A0:  03 E9 1B 00 83 7E 06 5A  7F 03 E9 12 00 BB 44 05   .....~.Z ......D.
87B0:  8B 46 06 D1 E0 2B D8 8B  07 E9 39 00 E9 36 00 81   .F...+.. ..9..6..
87C0:  7E 06 0E 01 7E 03 E9 1B  00 81 7E 06 B4 00 7D 03   ~...~... ..~...}.
87D0:  E9 11 00 8B 5E 06 D1 E3  8B 87 74 02 F7 D8 E9 14   ....^... ..t.....
87E0:  00 E9 11 00 BB AC 06 8B  46 06 D1 E0 2B D8 8B 07   ........ F...+...
87F0:  F7 D8 E9 00 00 5E 5F 8B  E5 5D CB 55 8B EC 81 EC   .....^_. .].U....
8800:  00 00 57 56 83 7E 06 00  7C 03 E9 05 00 81 46 06   ..WV.~.. |.....F.
8810:  68 01 83 7E 06 5A 7E 03  E9 18 00 83 7E 06 00 7D   h..~.Z~. ....~..}
8820:  03 E9 0F 00 8B 5E 06 D1  E3 8B 87 26 03 E9 5E 00   .....^.. ...&..^.
8830:  E9 5B 00 81 7E 06 B4 00  7E 03 E9 1D 00 83 7E 06   .[..~... ~.....~.
8840:  5A 7F 03 E9 14 00 BB 8E  04 8B 46 06 D1 E0 2B D8   Z....... ..F...+.
8850:  8B 07 F7 D8 E9 37 00 E9  34 00 81 7E 06 0E 01 7E   .....7.. 4..~...~
8860:  03 E9 1B 00 81 7E 06 B4  00 7D 03 E9 11 00 8B 5E   .....~.. .}.....^
8870:  06 D1 E3 8B 87 BE 01 F7  D8 E9 12 00 E9 0F 00 BB   ........ ........
8880:  F6 05 8B 46 06 D1 E0 2B  D8 8B 07 E9 00 00 5E 5F   ...F...+ ......^_
8890:  8B E5 5D CB 55 8B EC 81  EC 08 00 57 56 8B 46 08   ..].U... ...WV.F.
88A0:  0B 46 06 74 03 E9 09 00  B8 00 00 BA 00 00 E9 73   .F.t.... .......s
88B0:  00 C7 46 FC E8 03 C7 46  FE 00 00 C7 46 F8 E7 03   ..F....F ....F...
88C0:  C7 46 FA 00 00 8B 46 FC  8B 56 FE 39 56 FA 7E 03   .F....F. .V.9V.~.
88D0:  E9 48 00 7D 03 E9 08 00  39 46 F8 72 03 E9 3B 00   .H.}.... 9F.r..;.
88E0:  8B 46 F8 8B 56 FA 89 46  FC 89 56 FE B8 02 00 BA   .F..V..F ..V.....
88F0:  00 00 52 50 FF 76 FE FF  76 FC FF 76 08 FF 76 06   ..RP.v.. v..v..v.
8900:  9A 94 2A F2 0B 03 46 FC  13 56 FE 52 50 9A 94 2A   ..*...F. .V.RP..*
8910:  F2 0B 89 46 F8 89 56 FA  E9 AA FF 8B 46 F8 8B 56   ...F..V. ....F..V
8920:  FA E9 00 00 5E 5F 8B E5  5D CB 55 8B EC 81 EC 06   ....^_.. ].U.....
8930:  00 57 56 83 7E 08 00 74  03 E9 1A 00 83 7E 06 00   .WV.~..t .....~..
8940:  74 03 E9 09 00 B8 FF FF  E9 AF 00 E9 05 00 C7 46   t....... .......F
8950:  FE 5A 00 E9 7A 00 83 7E  06 00 74 03 E9 08 00 C7   .Z..z..~ ..t.....
8960:  46 FE 00 00 E9 69 00 FF  76 08 9A 1E 2A F2 0B 83   F....i.. v...*...
8970:  C4 02 89 46 FC FF 76 06  9A 1E 2A F2 0B 83 C4 02   ...F..v. ..*.....
8980:  89 46 FA 8B 46 FC 39 46  FA 7C 03 E9 21 00 8B 46   .F..F.9F .|..!..F
8990:  FC 99 52 50 B8 64 00 F7  6E FA 52 50 9A 94 2A F2   ..RP.d.. n.RP..*.
89A0:  0B 8B D8 D1 E3 8B 87 5C  02 89 46 FE E9 21 00 8B   .......\ ..F..!..
89B0:  46 FA 99 52 50 B8 64 00  F7 6E FC 52 50 9A 94 2A   F..RP.d. .n.RP..*
89C0:  F2 0B 8B D8 D1 E3 B8 5A  00 2B 87 5C 02 89 46 FE   .......Z .+.\..F.
89D0:  83 7E 08 00 7C 03 E9 09  00 B8 B4 00 2B 46 FE 89   .~..|... ....+F..
89E0:  46 FE 83 7E 06 00 7F 03  E9 09 00 B8 68 01 2B 46   F..~.... ....h.+F
89F0:  FE 89 46 FE 8B 46 FE E9  00 00 5E 5F 8B E5 5D CB   ..F..F.. ..^_..].
8A00:  55 8B EC 81 EC 06 00 57  56 C7 46 FE 01 00 8B 46   U......W V.F....F
8A10:  06 89 46 FA 83 7E FA 00  7C 03 E9 05 00 81 46 FA   ..F..~.. |.....F.
```

```
8A20:  68 01 81 7E FA B4 00 7D  03 E9 05 00 81 6E FA B4   h..~...} .....n..
8A30:  00 83 7E FA 5A 74 03 E9  06 00 B8 FF FF E9 2C 00   ..~.Zt.. ......,.
8A40:  83 7E FA 5A 7F 03 E9 0E  00 B8 B4 00 2B 46 FA 89   .~.Z.... ....+F..
8A50:  46 FA C7 46 FE FF FF 8B  5E FA D1 E3 8B 87 A8 01   F..F.... ^.......
8A60:  F7 6E FE 89 46 FC 8B 46  FC E9 00 00 5E 5F 8B E5   .n..F..F ....^_..
8A70:  5D CB 55 8B EC 81 EC 02  00 57 56 B8 1A 00 F7 6E   ].U..... .WV....n
8A80:  0A 8B F0 C4 5E 06 26 83  78 04 FF 75 03 E9 37 00   ....^.&. x..u..7.
8A90:  B8 1A 00 F7 6E 0A 8B F0  C4 5E 06 26 8B 40 0A 8B   ....n... .^.&.@..
8AA0:  C8 B8 1A 00 F7 6E 0A 8B  F0 C4 5E 06 26 39 48 04   .....n.. ..^.&9H.
8AB0:  75 03 E9 12 00 B8 1A 00  F7 6E 0A 8B F0 C4 5E 06   u....... .n....^.
8AC0:  26 8B 40 04 E9 FF 00 B8  1A 00 F7 6E 0A 8B F0 C4   &.@..... ...n....
8AD0:  5E 06 26 83 78 10 FF 75  03 E9 37 00 B8 1A 00 F7   ^.&.x..u ..7.....
8AE0:  6E 0A 8B F0 C4 5E 06 26  8B 40 10 8B C8 B8 1A 00   n....^.& .@......
8AF0:  F7 6E 0A 8B F0 C4 5E 06  26 39 48 0A 75 03 E9 12   .n....^. &9H.u...
8B00:  00 B8 1A 00 F7 6E 0A 8B  F0 C4 5E 06 26 8B 40 10   .....n.. ..^.&.@.
8B10:  E9 B3 00 B8 1A 00 F7 6E  0A 8B F0 C4 5E 06 26 8B   .......n ....^.&.
8B20:  40 0A 89 46 FE B8 1A 00  F7 6E FE 8B F0 C4 5E 06   @..F.... .n....^.
8B30:  8B 46 0A 26 39 40 04 74  03 E9 63 00 B8 1A 00 F7   .F.&9@.t ..c.....
8B40:  6E FE 8B F0 C4 5E 06 8B  46 0A 26 39 40 10 75 03   n....^.. F.&9@.u.
8B50:  E9 4C 00 B8 1A 00 F7 6E  FE 8B F0 C4 5E 06 26 83   .L.....n ....^.&.
8B60:  78 10 FF 75 03 E9 37 00  B8 1A 00 F7 6E FE 8B F0   x..u..7. ....n...
8B70:  C4 5E 06 26 8B 40 10 8B  C8 B8 1A 00 F7 6E FE 8B   .^.&.@.. .....n..
8B80:  F0 C4 5E 06 26 39 48 0A  75 03 E9 12 00 B8 1A 00   ..^.&9H. u.......
8B90:  F7 6E FE 8B F0 C4 5E 06  26 8B 40 10 E9 27 00 8B   .n....^. &.@..'..
8BA0:  46 FE 89 46 0A B8 1A 00  F7 6E 0A 8B F0 C4 5E 06   F..F.... .n....^.
8BB0:  26 8B 40 0A 89 46 FE 40  74 03 E9 06 00 B8 FF FF   &.@..F.@ t.......
8BC0:  E9 03 00 E9 5F FF 5E 5F  8B E5 5D CB 55 8B EC 81   ...._.^_ ..].U...
8BD0:  EC 00 00 57 56 8B 46 0A  2B 46 06 50 8B 46 0C 2B   ...WV.F. +F.P.F.+
8BE0:  46 08 50 9A CA 01 56 08  83 C4 04 E9 00 00 5E 5F   F.P...V. ......^_
8BF0:  8B E5 5D CB 55 8B EC 81  EC 02 00 57 56 FF 76 14   ..].U... ...WV.v.
8C00:  FF 76 12 FF 76 10 FF 76  0E 9A 5C 01 87 08 83 C4   .v..v..v ..\.....
8C10:  08 FF 76 0C FF 76 0A FF  76 08 FF 76 06 8B F0 9A   ..v..v.. v..v....
8C20:  5C 01 87 08 83 C4 08 2B  C6 89 46 FE 81 7E FE B4   \......+ ..F..~..
8C30:  00 7F 03 E9 09 00 8B 46  FE 2D 68 01 E9 16 00 81   .......F .-h.....
8C40:  7E FE 4C FF 7D 03 E9 06  00 8B 46 FE E9 06 00 8B   ~.L.}... ..F.....
8C50:  46 FE 05 68 01 E9 00 00  5E 5F 8B E5 5D CB 55 8B   F..h.... ^_..].U.
8C60:  EC 81 EC 08 00 57 56 FF  36 68 0C FF 36 66 0C C4   .....WV. 6h..6f..
8C70:  5E 06 26 8B 07 99 52 50  9A 2E 2B F2 0B FF 36 74   ^.&...RP ..+...6t
8C80:  0C FF 36 72 0C C4 5E 0A  8B C8 26 8B 07 8B DA 99   ..6r..^. ..&.....
8C90:  52 50 8B F1 8B FB 9A 2E  2B F2 0B 03 F0 13 FA 03   RP...... +.......
8CA0:  36 7E 0C 13 3E 80 0C 81  C6 88 13 83 D7 00 89 76   6~..>... .......v
8CB0:  FC 89 7E FE FF 36 6C 0C  FF 36 6A 0C C4 5E 06 26   ..~..6l. .6j..^.&
8CC0:  8B 07 99 52 50 9A 2E 2B  F2 0B FF 36 78 0C FF 36   ...RP..+ ...6x..6
8CD0:  76 0C C4 5E 0A 8B C8 26  8B 07 8B DA 99 52 50 8B   v..^...& .....RP.
8CE0:  F1 8B FB 9A 2E 2B F2 0B  03 F0 13 FA 03 36 82 0C   .....+.. .....6..
8CF0:  13 3E 84 0C 81 C6 88 13  83 D7 00 89 76 F8 89 7E   .>...... ....v..~
8D00:  FA B8 10 27 BA 00 00 52  50 FF 76 FE FF 76 FC 9A   ...'...R P.v..v..
8D10:  94 2A F2 0B C4 5E 06 26  89 07 B8 10 27 BA 00 00   .*...^.& ....'...
8D20:  52 50 FF 76 FA FF 76 F8  9A 94 2A F2 0B C4 5E 0A   RP.v..v. ..*...^.
8D30:  26 89 07 5E 5F 8B E5 5D  CB 55 8B EC 81 EC 06 00   &..^_..] .U......
8D40:  57 56 FF 76 14 FF 76 12  FF 76 10 FF 76 0E FF 76   WV.v..v. .v..v..v
8D50:  0C FF 76 0A FF 76 08 FF  76 06 9A 84 01 87 08 83   ..v..v.. v.......
8D60:  C4 10 89 46 FA 83 7E FA  00 7C 03 E9 27 00 8B 46   ...F..~. .|..'..F
8D70:  FA F7 D8 50 9A 9B 00 56  08 83 C4 02 89 46 FE 8B   ...P...V .....F..
```

```
8D80:  46 FA F7 D8 50 9A 02 00  56 08 83 C4 02 F7 D8 89   F...P... V.......
8D90:  46 FC E9 1C 00 FF 76 FA  9A 9B 00 56 08 83 C4 02   F.....v. ...V....
8DA0:  89 46 FE FF 76 FA 9A 02  00 56 08 83 C4 02 89 46   .F..v... .V.....F
8DB0:  FC 8B 46 FE 99 A3 66 0C  89 16 68 0C 8B 46 FC F7   ..F...f. ..h..F..
8DC0:  D8 99 A3 72 0C 89 16 74  0C 8B 46 08 F7 D8 F7 6E   ...r...t ..F....n
8DD0:  FC 8B C8 8B 46 06 F7 D8  8B DA F7 6E FE 2B C1 1B   ....F... ...n.+..
8DE0:  D3 8B C8 B8 10 27 8B DA  F7 6E 0E 03 C1 13 D3 A3   .....'.. .n......
8DF0:  7E 0C 89 16 80 0C 8B 46  FC 99 A3 6A 0C 89 16 6C   ~......F ...j...l
8E00:  0C 8B 46 FE 99 A3 76 0C  89 16 78 0C 8B 46 08 F7   ..F...v. ..x..F..
8E10:  D8 F7 6E FE 8B C8 8B 46  06 F7 D8 8B DA F7 6E FC   ..n....F ......n.
8E20:  03 C8 13 DA B8 10 27 F7  6E 10 03 C8 13 DA 89 0E   ......'. n.......
8E30:  82 0C 89 1E 84 0C 2B C0  A3 70 0C A3 6E 0C 2B C0   ......+. .p..n.+.
8E40:  A3 7C 0C A3 7A 0C C7 06  86 0C 01 00 C7 06 88 0C   .|..z... ........
8E50:  00 00 5E 5F 8B E5 5D CB  55 8B EC 81 EC 0C 00 57   ..^_..]. U......W
8E60:  56 83 7E 0A FF 75 03 E9  07 02 B8 1A 00 F7 6E 0A   V.~..u.. ......n.
8E70:  03 46 06 8B 56 08 05 04  00 1E 8D 7E F8 8B F0 16   .F..V... ...~....
8E80:  07 8E DA A5 A5 A5 1F B8  1A 00 F7 6E 0A 8B F0 C4   ........ ...n....
8E90:  5E 06 26 83 78 0A FF 74  03 E9 08 00 C7 46 F4 02   ^.&.x..t .....F..
8EA0:  00 E9 30 00 B8 1A 00 F7  6E 0A 8B F0 C4 5E 06 B8   ..0..... n....^..
8EB0:  1A 00 26 F7 68 0A 8B F0  C4 5E 06 8B 46 0A 26 39   ..&.h... .^..F.&9
8EC0:  40 04 74 03 E9 08 00 C7  46 F4 02 00 E9 05 00 C7   @.t..... F.......
8ED0:  46 F4 16 00 8B 46 0C E9  6F 01 B8 1A 00 F7 6E 0A   F....F.. o.....n.
8EE0:  03 46 06 8B 56 08 05 10  00 8B C8 B8 1A 00 8B DA   .F..V... ........
8EF0:  F7 6E 0A 8B F0 8B C3 C4  5E 06 1E 8D 78 04 8B F1   .n...... ^...x...
8F00:  8E D8 A5 A5 A5 1F B8 1A  00 F7 6E 0A 03 46 06 8B   ........ ..n..F..
8F10:  56 08 05 0A 00 8B C8 B8  1A 00 8B DA F7 6E 0A 8B   V....... .....n..
8F20:  F0 8B C3 C4 5E 06 1E 8D  78 10 8B F1 8E D8 A5 A5   ....^... x.......
8F30:  A5 1F B8 1A 00 F7 6E 0A  8B F0 C4 5E 06 8D 78 0A   ......n. ...^..x.
8F40:  8D 76 F8 A5 A5 A5 FF 76  F4 B8 1A 00 F7 6E 0A 8B   .v.....v .....n..
8F50:  F0 C4 5E 06 26 FF 70 10  FF 76 08 FF 76 06 9A 0D   ..^.&.p. .v..v...
8F60:  06 87 08 83 C4 08 89 46  F6 B8 0A 00 50 B8 1A 00   .......F ....P...
8F70:  F7 6E 0A 8B F0 C4 5E 06  26 FF 70 0A FF 76 08 FF   .n....^. &.p..v..
8F80:  76 06 9A 0D 06 87 08 83  C4 08 89 46 FE E9 C9 00   v....... ...F....
8F90:  B8 1A 00 F7 6E 0A 03 46  06 8B 56 08 05 0A 00 8B   ....n..F ..V.....
8FA0:  C8 B8 1A 00 8B DA F7 6E  0A 8B F0 8B C3 C4 5E 06   .......n ......^.
8FB0:  1E 8D 78 04 8B F1 8E D8  A5 A5 A5 1F B8 1A 00 F7   ..x..... ........
8FC0:  6E 0A 03 46 06 8B 56 08  05 10 00 8B C8 B8 1A 00   n..F..V. ........
8FD0:  8B DA F7 6E 0A 8B F0 8B  C3 C4 5E 06 1E 8D 78 0A   ...n.... ..^...x.
8FE0:  8B F1 8E D8 A5 A5 A5 1F  B8 1A 00 F7 6E 0A 8B F0   ........ ....n...
8FF0:  C4 5E 06 8D 78 10 8D 76  F8 A5 A5 A5 FF 76 F4 B8   .^..x..v .....v..
9000:  1A 00 F7 6E 0A 8B F0 C4  5E 06 26 FF 70 04 FF 76   ...n.... ^.&.p..v
9010:  08 FF 76 06 9A 0D 06 87  08 83 C4 08 89 46 F6 B8   ..v..... .....F..
9020:  F4 FF 50 B8 1A 00 F7 6E  0A 8B F0 C4 5E 06 26 FF   ..P....n ....^.&.
9030:  70 0A FF 76 08 FF 76 06  9A 0D 06 87 08 83 C4 08   p..v..v. ........
9040:  89 46 FE E9 13 00 E9 10  00 40 75 03 E9 41 FF 48   .F...... .@u..A.H
9050:  48 75 03 E9 84 FE E9 00  00 83 7E FE FF 75 03 E9   Hu...... ..~..u..
9060:  09 00 8B 46 FE E9 0F 00  E9 06 00 8B 46 0A E9 06   ...F.... ....F...
9070:  00 B8 FF FF E9 00 00 5E  5F 8B E5 5D CB 55 8B EC   .......^ _..].U..
9080:  81 EC 0A 00 57 56 83 7E  0A FF 75 03 E9 CC 03 8B   ....WV.~ ..u.....
9090:  46 0C E9 7F 03 B8 1A 00  F7 6E 0A 03 46 06 8B 56   F....... .n..F..V
90A0:  08 05 04 00 1E 8D 7E F8  8B F0 16 07 8E DA A5 A5   ......~. ........
90B0:  A5 1F B8 1A 00 F7 6E 0A  03 46 06 8B 56 08 05 10   ......n. .F..V...
90C0:  00 8B C8 B8 1A 00 8B DA  F7 6E 0A 8B F0 8B C3 C4   ........ .n......
90D0:  5E 06 1E 8D 78 04 8B F1  8E D8 A5 A5 A5 1F B8 1A   ^...x... ........
```

```
90E0:  00 F7 6E 0A 03 46 06 8B  56 08 05 0A 00 8B C8 B8   ..n..F.. V.......
90F0:  1A 00 8B DA F7 6E 0A 8B  F0 8B C3 C4 5E 06 1E 8D   .....n.. ....^...
9100:  78 10 8B F1 8E D8 A5 A5  A5 1F B8 1A 00 F7 6E 0A   x....... ......n.
9110:  8B F0 C4 5E 06 8D 78 0A  8D 76 F8 A5 A5 A5 B8 0A   ...^..x. .v......
9120:  00 50 B8 1A 00 F7 6E 0A  8B F0 C4 5E 06 26 FF 70   .P....n. ...^.&.p
9130:  0A FF 76 08 FF 76 06 9A  0D 06 87 08 83 C4 08 89   ..v..v.. ........
9140:  46 FE E9 F2 02 B8 1A 00  F7 6E 0A 03 46 06 8B 56   F....... .n..F..V
9150:  08 05 10 00 1E 8D 7E F8  8B F0 16 07 8E DA A5 A5   ......~. ........
9160:  A5 1F B8 1A 00 F7 6E 0A  03 46 06 8B 56 08 05 04   ......n. .F..V...
9170:  00 8B C8 B8 1A 00 8B DA  F7 6E 0A 8B F0 8B C3 C4   ........ .n......
9180:  5E 06 1E 8D 78 10 8B F1  8E D8 A5 A5 A5 1F B8 1A   ^...x... ........
9190:  00 F7 6E 0A 03 46 06 8B  56 08 05 0A 00 8B C8 B8   ..n..F.. V.......
91A0:  1A 00 8B DA F7 6E 0A 8B  F0 8B C3 C4 5E 06 1E 8D   .....n.. ....^...
91B0:  78 04 8B F1 8E D8 A5 A5  A5 1F B8 1A 00 F7 6E 0A   x....... ......n.
91C0:  8B F0 C4 5E 06 8D 78 0A  8D 76 F8 A5 A5 A5 B8 F4   ...^..x. .v......
91D0:  FF 50 B8 1A 00 F7 6E 0A  8B F0 C4 5E 06 26 FF 70   .P....n. ...^.&.p
91E0:  0A FF 76 08 FF 76 06 9A  0D 06 87 08 83 C4 08 89   ..v..v.. ........
91F0:  46 FE E9 42 02 B8 1A 00  F7 6E 0A 03 46 06 8B 56   F..B.... .n..F..V
9200:  08 05 10 00 1E 8D 7E F8  8B F0 16 07 8E DA A5 A5   ......~. ........
9210:  A5 1F B8 1A 00 F7 6E 0A  8B F0 C4 5E 06 26 83 78   ......n. ...^.&.x
9220:  0A FF 74 03 E9 0E 00 8B  46 0A 89 46 FE C7 46 F6   ..t..... F..F..F.
9230:  FF FF E9 30 00 B8 1A 00  F7 6E 0A 8B F0 C4 5E 06   ...0.... .n....^.
9240:  B8 1A 00 26 F7 68 0A 8B  F0 C4 5E 06 8B 46 0A 26   ...&.h.. ..^..F.&
9250:  39 40 04 74 03 E9 08 00  C7 46 F6 02 00 E9 05 00   9@.t.... .F......
9260:  C7 46 F6 16 00 B8 1A 00  F7 6E 0A 03 46 06 8B 56   .F...... .n..F..V
9270:  08 05 0A 00 8B C8 B8 1A  00 8B DA F7 6E 0A 8B F0   ........ ....n...
9280:  8B C3 C4 5E 06 1E 8D 78  10 8B F1 8E D8 A5 A5 A5   ...^...x ........
9290:  1F B8 1A 00 F7 6E 0A 03  46 06 8B 56 08 05 04 00   .....n.. F..V....
92A0:  8B C8 B8 1A 00 8B DA F7  6E 0A 8B F0 8B C3 C4 5E   ........ n......^
92B0:  06 1E 8D 78 0A 8B F1 8E  D8 A5 A5 A5 1F B8 1A 00   ...x.... ........
92C0:  F7 6E 0A 8B F0 C4 5E 06  8D 78 04 8D 76 F8 A5 A5   .n....^. .x..v...
92D0:  A5 83 7E F6 FF 74 03 E9  03 00 E9 5A 01 FF 76 F6   ..~..t.. ...Z..v.
92E0:  B8 1A 00 F7 6E 0A 8B F0  C4 5E 06 26 FF 70 10 FF   ....n... .^.&.p..
92F0:  76 08 FF 76 06 9A 0D 06  87 08 83 C4 08 89 46 FE   v..v.... ......F.
9300:  E9 34 01 B8 1A 00 F7 6E  0A 03 46 06 8B 56 08 05   .4.....n ..F..V..
9310:  10 00 1E 8D 7E F8 8B F0  16 07 8E DA A5 A5 A5 1F   ....~... ........
9320:  B8 1A 00 F7 6E 0A 8B F0  C4 5E 06 26 83 78 0A FF   ....n... .^.&.x..
9330:  74 03 E9 0E 00 8B 46 0A  89 46 FE C7 46 F6 FF FF   t.....F. .F..F...
9340:  E9 30 00 B8 1A 00 F7 6E  0A 8B F0 C4 5E 06 B8 1A   .0.....n ....^...
9350:  00 26 F7 68 0A 8B F0 C4  5E 06 8B 46 0A 26 39 40   .&.h.... ^..F.&9@
9360:  04 74 03 E9 08 00 C7 46  F6 02 00 E9 05 00 C7 46   .t.....F .......F
9370:  F6 16 00 B8 1A 00 F7 6E  0A 03 46 06 8B 56 08 05   .......n ..F..V..
9380:  04 00 8B C8 B8 1A 00 8B  DA F7 6E 0A 8B F0 8B C3   ........ ..n.....
9390:  C4 5E 06 1E 8D 78 10 8B  F1 8E D8 A5 A5 A5 1F B8   .^...x.. ........
93A0:  1A 00 F7 6E 0A 03 46 06  8B 56 08 05 0A 00 8B C8   ...n..F. .V......
93B0:  B8 1A 00 8B DA F7 6E 0A  8B F0 8B C3 C4 5E 06 1E   ......n. .....^..
93C0:  8D 78 04 8B F1 8E D8 A5  A5 A5 1F B8 1A 00 F7 6E   .x...... .......n
93D0:  0A 8B F0 C4 5E 06 8D 78  0A 8D 76 F8 A5 A5 A5 83   ....^..x ..v.....
93E0:  7E F6 FF 74 03 E9 03 00  E9 4C 00 FF 76 F6 B8 1A   ~..t.... .L..v...
93F0:  00 F7 6E 0A 8B F0 C4 5E  06 26 FF 70 04 FF 76 08   ..n....^ .&.p..v.
9400:  FF 76 06 9A 0D 06 87 08  83 C4 08 89 46 FE E9 26   .v...... ....F..&
9410:  00 E9 23 00 2D F4 FF 75  03 E9 29 FD 2D 0E 00 75   ..#.-..u ..).-..u
9420:  03 E9 D1 FD 2D 08 00 75  03 E9 69 FC 2D 0C 00 75   ....-..u ..i.-..u
9430:  03 E9 CF FE E9 00 00 B8  1A 00 F7 6E 0A 8B F0 C4   ........ ...n....
```

```
9440:  5E 06 26 83 78 0A FF 74  03 E9 09 00 8B 46 0A E9   ^.&.x..t .....F..
9450:  0F 00 E9 06 00 8B 46 FE  E9 06 00 B8 FF FF E9 00   ......F. ........
9460:  00 5E 5F 8B E5 5D CB 55  8B EC 81 EC 04 00 57 56   .^_..].U ......WV
9470:  C7 46 FE FF FF B8 1A 00  F7 6E 1C 8B F0 C4 5E 12   .F...... .n....^.
9480:  8B 46 1A 26 39 40 0A 74  03 E9 7B 00 B8 1A 00 F7   .F.&9@.t ..{.....
9490:  6E 0E 8B F0 C4 5E 06 8B  46 10 26 39 40 04 74 03   n....^.. F.&9@.t.
94A0:  E9 32 00 B8 1A 00 F7 6E  1A 8B F0 C4 5E 12 8B 46   .2.....n ....^..F
94B0:  1C 26 39 40 10 74 03 E9  18 00 B8 01 00 50 FF 76   .&9@.t.. .....P.v
94C0:  1A FF 76 14 FF 76 12 9A  E8 03 87 08 83 C4 08 89   ..v..v.. ........
94D0:  46 FE E9 2F 00 B8 1A 00  F7 6E 1A 8B F0 C4 5E 12   F../.... .n....^.
94E0:  8B 46 1C 26 39 40 04 74  03 E9 18 00 B8 FF FF 50   .F.&9@.t .......P
94F0:  FF 76 1A FF 76 14 FF 76  12 9A E8 03 87 08 83 C4   .v..v..v ........
9500:  08 89 46 FE E9 4A 00 B8  1A 00 F7 6E 0E 8B F0 C4   ..F..J.. ...n....
9510:  5E 06 8B 46 10 26 39 40  10 74 03 E9 1B 00 B8 01   ^..F.&9@ .t......
9520:  00 50 FF 76 1A FF 76 14  FF 76 12 9A E8 03 87 08   .P.v..v. .v......
9530:  83 C4 08 89 46 FE E9 18  00 B8 FF FF 50 FF 76 1A   ....F... ....P.v.
9540:  FF 76 14 FF 76 12 9A E8  03 87 08 83 C4 08 89 46   .v..v... .......F
9550:  FE 83 7E FE FF 75 03 E9  20 00 B8 1A 00 F7 6E 1A   ..~..u..  .....n.
9560:  8B F0 C4 5E 12 26 8B 40  16 89 46 FC 8B 5E FC D1   ...^.&.@ ..F..^..
9570:  E3 C4 76 16 8B 46 FE 26  89 00 8B 46 FE E9 00 00   ..v..F.& ...F....
9580:  5E 5F 8B E5 5D CB 55 8B  EC 81 EC 00 00 57 56 83   ^_..].U. .....WV.
9590:  3E 92 04 00 75 03 E9 0E  00 FF 76 06 9A 15 0D 87   >...u... ..v.....
95A0:  08 83 C4 02 E9 0B 00 FF  76 06 9A 48 0B 87 08 83   ........ v..H....
95B0:  C4 02 5E 5F 8B E5 5D CB  55 8B EC 81 EC 14 00 57   ..^_..]. U......W
95C0:  56 83 7E 06 00 74 03 E9  20 00 C7 46 EC DA DC C7   V.~..t..  ..F....
95D0:  46 EE AE 0E 8E 06 50 0B  26 A1 E6 89 89 46 FA C7   F.....P. &....F..
95E0:  46 FC 9A 8B 8C 46 FE E9  1D 00 C7 46 EC 84 53 C7   F....F.. ...F..S.
95F0:  46 EE AE 0E 8E 06 52 0B  26 A1 90 00 89 46 FA C7   F.....R. &....F..
9600:  46 FC 44 02 8C 46 FE B8  04 00 50 B8 00 00 50 FF   F.D..F.. ..P...P.
9610:  76 EE FF 76 EC 9A 72 29  F2 0B 83 C4 08 C7 46 F6   v..v..r) ......F.
9620:  00 00 B8 00 00 89 46 F0  89 46 F8 E9 03 00 FF 46   ......F. .F.....F
9630:  F0 8B 46 FA 39 46 F8 7C  03 E9 43 01 83 7E F8 FF   ..F.9F.| ..C..~..
9640:  75 03 E9 37 01 C7 46 F2  00 00 B8 1A 00 F7 6E F8   u..7..F. ......n.
9650:  8B D8 C4 76 FC 26 8B 00  8B 5E F2 8B CB D1 E3 03   ...v.&.. .^......
9660:  D9 D1 E3 C4 76 EC 26 39  00 7C 03 E9 11 00 8B 46   ....v.&9 .|.....F
9670:  F6 39 46 F2 7C 03 E9 06  00 FF 46 F2 E9 CB FF B8   .9F.|... ..F.....
9680:  1A 00 F7 6E F8 8B D8 C4  76 FC 26 8B 00 8B 5E F2   ...n.... v.&...^.
9690:  8B CB D1 E3 03 D9 D1 E3  C4 76 EC 26 39 00 74 03   ........ .v.&9.t.
96A0:  E9 37 00 B8 1A 00 F7 6E  F8 8B F0 C4 5E FC 26 8B   .7.....n ....^.&.
96B0:  40 02 8B 76 F2 8B CE D1  E6 03 F1 D1 E6 C4 5E EC   @..v.... ......^.
96C0:  26 39 40 02 7C 03 E9 11  00 8B 46 F6 39 46 F2 7C   &9@.|... ..F.9F.|
96D0:  03 E9 06 00 FF 46 F2 E9  A5 FF 8B 46 F6 89 46 F4   .....F.. ...F..F.
96E0:  E9 03 00 FF 4E F4 8B 46  F2 39 46 F4 7F 03 E9 30   ....N..F .9F....0
96F0:  00 8B 5E F4 8B C3 D1 E3  03 D8 D1 E3 C4 76 EC 8B   ..^..... .....v..
9700:  46 F4 8B C8 D1 E0 03 C1  D1 E0 03 46 EC 8B 56 EE   F....... ...F..V.
9710:  2D 06 00 1E 8D 38 8B F0  8E DA A5 A5 A5 1F E9 C2   -....8.. ........
9720:  FF FF 46 F6 B8 1A 00 F7  6E F8 8B D8 C4 76 FC 26   ..F..... n....v.&
9730:  8B 00 8B 5E F2 8B CB D1  E3 03 D9 D1 E3 C4 76 EC   ...^.... ......v.
9740:  26 89 00 B8 1A 00 F7 6E  F8 8B F0 C4 5E FC 26 8B   &......n ....^.&.
9750:  40 02 8B 76 F2 8B CE D1  E6 03 F1 D1 E6 C4 5E EC   @..v.... ......^.
9760:  26 89 40 02 8B 46 F8 8B  76 F2 8B CE D1 E6 03 F1   &.@..F.. v.......
9770:  D1 E6 C4 5E EC 26 89 40  04 FF 46 F8 E9 AF FE 5E   ...^.&.@ ..F....^
9780:  5F 8B E5 5D CB 55 8B EC  81 EC 1C 00 57 56 83 7E   _..].U.. ....WV.~
9790:  06 00 74 03 E9 2C 00 C7  46 E8 DA DC C7 46 EA AE   ..t..,.. F....F..
```

```
97A0:  0E C7 46 FC 9A 8B C7 46  FE AE 0E C7 46 E4 0A 8A   ..F....F ....F...
97B0:  C7 46 E6 AE 0E 8E 06 50  0B 26 A1 E4 89 89 46 EE   .F.....P .&....F.
97C0:  E9 29 00 C7 46 E8 84 53  C7 46 EA AE 0E C7 46 FC   .)..F..S .F....F.
97D0:  44 02 C7 46 FE AE 0E C7  46 E4 B4 00 C7 46 E6 AE   D..F.... F....F..
97E0:  0E 8E 06 52 0B 26 A1 8E  00 89 46 EE B8 04 00 50   ...R.&.. ..F....P
97F0:  B8 00 00 50 FF 76 EA FF  76 E8 9A 72 29 F2 0B 83   ...P.v.. v..r)...
9800:  C4 08 C7 46 F8 00 00 C7  46 F2 00 00 E9 03 00 FF   ...F.... F.......
9810:  46 F2 8B 46 EE 39 46 F2  7C 03 E9 4C 01 8B 5E F2   F..F.9F. |..L..^.
9820:  D1 E3 C4 76 E4 26 8B 00  89 46 FA 83 7E FA 00 7D   ...v.&.. .F..~..}
9830:  03 E9 32 01 B8 1A 00 F7  6E FA 8B D8 C4 76 FC 26   ..2..... n....v.&
9840:  8B 00 89 46 F0 3D 00 00  7D 03 E9 02 01 B8 1A 00   ...F.=.. }.......
9850:  F7 6E FA 8B F0 C4 5E FC  26 8B 40 02 89 46 EC C7   .n....^. &.@..F..
9860:  46 F4 00 00 E9 03 00 FF  46 F4 8B 46 F8 39 46 F4   F....... F..F.9F.
9870:  7C 03 E9 52 00 8B 5E F4  8B C3 D1 E3 03 D8 D1 E3   |..R..^. ........
9880:  C4 76 E8 8B 46 F0 26 39  00 7E 03 E9 33 00 8B 5E   .v..F.&9 .~..3..^
9890:  F4 8B C3 D1 E3 03 D8 D1  E3 C4 76 E8 8B 46 F0 26   ........ ..v..F.&
98A0:  39 00 74 03 E9 1D 00 8B  76 F4 8B C6 D1 E6 03 F0   9.t..... v.......
98B0:  D1 E6 C4 5E E8 8B 46 EC  26 39 40 02 7F 03 E9 03   ...^..F. &9@.....
98C0:  00 E9 03 00 E9 A0 FF 8B  46 F8 89 46 F6 E9 03 00   ........ F..F....
98D0:  FF 4E F6 8B 46 F4 39 46  F6 7F 03 E9 30 00 8B 5E   .N..F.9F ....0..^
98E0:  F6 8B C3 D1 E3 03 D8 D1  E3 C4 76 E8 8B 46 F6 8B   ........ ..v..F..
98F0:  C8 D1 E0 03 C1 D1 E0 03  46 E8 8B 56 EA 2D 06 00   ........ F..V.-..
9900:  1E 8D 38 8B F0 8E DA A5  A5 A5 1F E9 C2 FF 8B 5E   ..8..... .......^
9910:  F4 8B C3 D1 E3 03 D8 D1  E3 C4 76 E8 8B 46 F0 26   ........ ..v..F.&
9920:  89 00 8B 46 EC 8B 76 F4  8B CE D1 E6 03 F1 D1 E6   ...F..v. ........
9930:  C4 5E E8 26 89 40 02 8B  46 FA 8B 76 F4 8B CE D1   .^.&.@.. F..v....
9940:  E6 03 F1 D1 E6 C4 5E E8  26 89 40 04 FF 46 F8 FF   ......^. &.@..F..
9950:  76 FA FF 76 FE FF 76 FC  9A 02 00 87 08 83 C4 06   v..v..v. ........
9960:  89 46 FA E9 C5 FE E9 A6  FE 5E 5F 8B E5 5D CB 00   .F...... .^_..]..
9970:  55 8B EC 81 EC 00 00 57  56 C7 06 94 04 FF FF C7   U......W V.......
9980:  06 96 04 00 00 C7 06 98  04 FF FF 5E 5F 8B E5 5D   ........ ...^_..]
9990:  CB 55 8B EC 81 EC 00 00  57 56 C4 5E 0A 26 8A 07   .U...... WV.^.&..
99A0:  C4 5E 06 26 32 07 25 7F  00 C4 5E 0A 26 31 07 B1   .^.&2.%. ..^.&1..
99B0:  07 C4 5E 06 26 8B 47 02  D3 E0 C4 5E 0A 26 32 07   ..^.&.G. ...^.&2.
99C0:  25 7F 00 C4 5E 06 26 8B  57 02 D3 E2 33 C2 C4 5E   %...^.&. W...3..^
99D0:  0A 26 89 07 C4 5E 06 26  8B 47 0E C4 5E 0A 26 89   .&...^.& .G..^.&.
99E0:  47 02 C4 5E 06 26 8B 47  10 C4 5E 0A 26 89 47 04   G..^.&.G ..^.&.G.
99F0:  C4 5E 06 26 8B 47 20 25  FE 01 D1 F8 C4 5E 0A 26   .^.&.G % .....^.&
9A00:  8A 6F 07 2A C9 0B C1 C4  5E 0A 26 89 47 06 C4 5E   .o.*.... ^.&.G..^
9A10:  06 26 8B 47 22 25 FE 01  D1 F8 C4 5E 0A 26 8A 4F   .&.G"%.. ...^.&.O
9A20:  06 80 E1 FF 8A D1 8A F0  C4 5E 0A 26 89 57 06 C4   ........ .^.&.W..
9A30:  5E 06 26 8B 47 24 C4 5E  0A 26 89 47 08 5E 5F 8B   ^.&.G$.^ .&.G.^_.
9A40:  E5 5D CB 55 8B EC 81 EC  00 00 57 56 C4 5E 06 26   .].U.... ..WV.^.&
9A50:  8A 07 25 7F 00 C4 5E 0A  26 89 07 B1 07 C4 5E 06   ..%...^. &.....^.
9A60:  26 8B 07 D3 E8 C4 5E 0A  26 89 47 02 C4 5E 06 26   &.....^. &.G..^.&
9A70:  8B 47 02 C4 5E 0A 26 89  47 0E C4 5E 06 26 8B 47   .G..^.&. G..^.&.G
9A80:  04 C4 5E 0A 26 89 47 10  C4 5E 06 26 8A 47 06 2A   ..^.&.G. .^.&.G.*
9A90:  E4 D1 E0 C4 5E 0A 26 89  47 20 C4 5E 06 26 8A 47   ....^.&. G .^.&.G
9AA0:  07 2A E4 D1 E0 C4 5E 0A  26 89 47 22 C4 5E 06 26   .*....^. &.G".^.&
9AB0:  8B 47 08 C4 5E 0A 26 89  47 24 5E 5F 8B E5 5D CB   .G..^.&. G$^_..].
9AC0:  55 8B EC 81 EC 00 00 57  56 C4 5E 0E 26 C7 07 00   U......W V.^.&...
9AD0:  00 C4 5E 0E 2B C0 26 89  47 04 26 89 47 02 B8 1A   ..^.+.&. G.&.G...
9AE0:  00 F7 6E 0C 8B D8 C4 76  06 26 8B 00 25 FE 01 D1   ..n....v .&..%...
9AF0:  F8 C4 5E 0E 26 8A 6F 01  2A C9 0B C1 C4 5E 0E 26   ..^.&.o. *....^.&
```

```
9B00:  89 07 B8 1A 00 F7 6E 0C  8B F0 C4 5E 06 26 8B 40   ......n. ...^.&.@
9B10:  02 25 FE 01 D1 F8 C4 5E  0E 26 8A 0F 80 E1 FF 8A   .%.....^ .&......
9B20:  D1 8A F0 C4 5E 0E 26 89  17 B8 1A 00 F7 6E 0C 8B   ....^.&. .....n..
9B30:  F0 C4 5E 06 26 8A 60 18  D0 E4 2A C0 C4 5E 0E 26   ..^.&.`. ..*..^.&
9B40:  32 67 05 25 00 02 C4 5E  0E 26 31 47 04 B8 1A 00   2g.%...^ .&1G....
9B50:  F7 6E 0C 8B F0 C4 5E 06  26 8B 40 18 B1 04 D3 E8   .n....^. &.@.....
9B60:  8A E0 D0 E4 D0 E4 2A C0  C4 5E 0E 26 32 67 05 25   ......*. .^.&2g.%
9B70:  00 04 C4 5E 0E 26 31 47  04 B8 1A 00 F7 6E 0C 8B   ...^.&1G .....n..
9B80:  F0 C4 5E 06 26 8B 40 18  D3 E0 C4 5E 0E 26 32 67   ..^.&.@. ...^.&2g
9B90:  05 25 00 08 C4 5E 0E 26  31 47 04 B8 1A 00 F7 6E   .%...^.& 1G.....n
9BA0:  0C 8B F0 C4 5E 06 26 83  78 04 FF 75 03 E9 06 00   ....^.&. x..u....
9BB0:  B8 01 00 E9 03 00 B8 00  00 8A E0 2A C0 B1 05 D3   ........ ...*....
9BC0:  E0 C4 5E 0E 26 32 67 05  25 00 20 C4 5E 0E 26 31   ..^.&2g. %. .^.&1
9BD0:  47 04 B8 1A 00 F7 6E 0C  8B F0 C4 5E 06 26 83 78   G.....n. ...^.&.x
9BE0:  10 FF 75 03 E9 06 00 B8  01 00 E9 03 00 B8 00 00   ..u..... ........
9BF0:  8A E0 2A C0 B1 06 D3 E0  C4 5E 0E 26 32 67 05 25   ..*..... .^.&2g.%
9C00:  00 40 C4 5E 0E 26 31 47  04 C4 5E 0E 26 81 67 04   .@.^.&1G ..^.&.g.
9C10:  FF EF C4 5E 12 26 81 67  04 FF EF 83 7E 0A FF 74   ...^.&.g ....~..t
9C20:  03 E9 1E 00 C4 5E 0E 26  81 67 04 00 FE C4 5E 0E   .....^.& .g....^.
9C30:  26 81 4F 02 00 FF C4 5E  0E 26 81 4F 02 FF 00 E9   &.O....^ .&.O....
9C40:  CC 01 B8 1A 00 F7 6E 0A  8B F0 C4 5E 06 8B 46 0C   ......n. ...^..F.
9C50:  26 39 40 04 74 03 E9 2D  01 B8 1A 00 F7 6E 0A 8B   &9@.t..- .....n..
9C60:  F0 C4 5E 06 26 8B 40 06  25 FE 01 D1 F8 C4 5E 0E   ..^.&.@. %.....^.
9C70:  26 8A 6F 03 2A C9 0B C1  C4 5E 0E 26 89 47 02 B8   &.o.*... .^.&.G..
9C80:  1A 00 F7 6E 0A 8B F0 C4  5E 06 8B 46 0C 26 39 40   ...n.... ^..F.&9@
9C90:  10 74 03 E9 ED 00 B8 1A  00 F7 6E 0A 8B F0 C4 5E   .t...... ..n....^
9CA0:  06 26 8B 40 12 25 FE 01  D1 F8 C4 5E 12 26 8A 6F   .&.@.%.. ...^.&.o
9CB0:  03 2A C9 0B C1 C4 5E 12  26 89 47 02 B8 1A 00 F7   .*....^. &.G.....
9CC0:  6E 0C 8B F0 C4 5E 06 26  8B 40 10 8B C8 B8 1A 00   n....^.& .@......
9CD0:  F7 6E 0C 8B F0 C4 5E 06  26 39 48 0A 74 03 E9 4E   .n....^. &9H.t..N
9CE0:  00 B8 1A 00 F7 6E 0C 8B  F0 C4 5E 06 26 8B 40 12   .....n.. ..^.&.@.
9CF0:  25 FE 01 D1 F8 C4 5E 12  26 8A 4F 02 80 E1 FF 8A   %.....^. &.O.....
9D00:  D1 8A F0 C4 5E 12 26 89  57 02 B8 1A 00 F7 6E 0C   ....^.&. W.....n.
9D10:  8B F0 C4 5E 06 26 8B 40  14 D1 F8 C4 5E 12 26 33   ...^.&.@ ....^.&3
9D20:  47 04 25 FF 01 C4 5E 12  26 31 47 04 E9 4B 00 B8   G.%...^. &1G..K..
9D30:  1A 00 F7 6E 0C 8B F0 C4  5E 06 26 8B 40 06 25 FE   ...n.... ^.&.@.%.
9D40:  01 D1 F8 C4 5E 12 26 8A  4F 02 80 E1 FF 8A D1 8A   ....^.&. O.......
9D50:  F0 C4 5E 12 26 89 57 02  B8 1A 00 F7 6E 0C 8B F0   ..^.&.W. ....n...
9D60:  C4 5E 06 26 8B 40 08 D1  F8 C4 5E 12 26 33 47 04   .^.&.@.. ..^.&3G.
9D70:  25 FF 01 C4 5E 12 26 31  47 04 C4 5E 0E 26 81 4F   %...^.&1 G..^.&.O
9D80:  04 00 10 E9 3D 00 B8 1A  00 F7 6E 0A 8B F0 C4 5E   ....=... ..n....^
9D90:  06 8B 46 0C 26 39 40 10  74 03 E9 26 00 B8 1A 00   ..F.&9@. t..&....
9DA0:  F7 6E 0A 8B F0 C4 5E 06  26 8B 40 12 25 FE 01 D1   .n....^. &.@.%...
9DB0:  F8 C4 5E 0E 26 8A 6F 03  2A C9 0B C1 C4 5E 0E 26   ..^.&.o. *....^.&
9DC0:  89 47 02 B8 1A 00 F7 6E  0C 8B F0 C4 5E 06 26 8B   .G.....n ....^.&.
9DD0:  40 0C 25 FE 01 D1 F8 C4  5E 0E 26 8A 4F 02 80 E1   @.%..... ^.&.O...
9DE0:  FF 8A D1 8A F0 C4 5E 0E  26 89 57 02 B8 1A 00 F7   ......^. &.W.....
9DF0:  6E 0C 8B F0 C4 5E 06 26  8B 40 0E D1 F8 C4 5E 0E   n....^.& .@....^.
9E00:  26 33 47 04 25 FF 01 C4  5E 0E 26 31 47 04 5E 5F   &3G.%... ^.&1G.^_
9E10:  8B E5 5D CB 55 8B EC 81  EC 02 00 57 56 C4 5E 0E   ..].U... ...WV.^.
9E20:  26 C7 07 FF FF C4 5E 06  26 8A 07 2A E4 D1 E0 89   &.....^. &..*....
9E30:  46 FE 8B 46 FE C4 5E 0A  26 89 07 C4 5E 06 26 8A   F..F..^. &...^.&.
9E40:  47 01 2A E4 D1 E0 89 46  FE 8B 46 FE C4 5E 0A 26   G.*....F ..F..^.&
9E50:  89 47 02 C4 5E 06 26 F7  47 04 FF 01 74 03 E9 2E   .G..^.&. G...t...
```

```
9E60:  00 C4 5E 06 26 8A 47 03  2A E4 3D FF FF 74 03 E9   ..^.&.G. *.=..t..
9E70:  1D 00 C4 5E 06 26 8A 47  02 2A E4 3D FF FF 74 03   ...^.&.G .*.=..t.
9E80:  E9 0C 00 C4 5E 0A 26 C7  47 0C FF FF E9 46 00 C4   ....^.&. G....F..
9E90:  5E 06 26 8A 47 03 2A E4  D1 E0 89 46 FE 8B 46 FE   ^.&.G.*. ...F..F.
9EA0:  C4 5E 0A 26 89 47 0C C4  5E 0A 26 81 7F 0C 68 01   .^.&.G.. ^.&...h.
9EB0:  7F 03 E9 09 00 C4 5E 0A  26 C7 47 0C FF FF C4 5E   ......^. &.G....^
9EC0:  06 26 8A 47 02 2A E4 D1  E0 89 46 FE 8B 46 FE C4   .&.G.*.. ..F..F..
9ED0:  5E 0E 26 89 07 C4 5E 0A  26 C7 47 06 FF FF C4 5E   ^.&...^. &.G....^
9EE0:  0A 26 C7 47 12 FF FF C4  5E 06 26 8B 47 04 25 FF   .&.G.... ^.&.G.%.
9EF0:  01 D1 E0 89 46 FE 8B 46  FE C4 5E 0A 26 89 47 0E   ....F..F ..^.&.G.
9F00:  C4 5E 06 26 8A 47 05 D0  E8 2A E4 C4 5E 0A 26 32   .^.&.G.. .*..^.&2
9F10:  47 18 25 01 00 C4 5E 0A  26 31 47 18 C4 5E 06 26   G.%...^. &1G..^.&
9F20:  F6 47 05 20 75 03 E9 18  00 C4 5E 06 26 F6 47 05   .G. u... ..^.&.G.
9F30:  40 75 03 E9 0B 00 C4 5E  0A 26 83 4F 18 08 E9 08   @u.....^ .&.O....
9F40:  00 C4 5E 0A 26 83 67 18  F7 B1 04 C4 5E 06 26 8A   ..^.&.g. ....^.&.
9F50:  47 05 D0 E8 D0 E8 2A E4  D3 E0 C4 5E 0A 26 32 47   G.....*. ...^.&2G
9F60:  18 25 10 00 C4 5E 0A 26  31 47 18 C4 5E 06 26 8B   .%...^.& 1G..^.&.
9F70:  47 04 D3 E8 C4 5E 0A 26  32 47 18 25 80 00 C4 5E   G....^.& 2G.%...^
9F80:  0A 26 31 47 18 C4 5E 0A  26 C7 47 0A FF FF C4 5E   .&1G..^. &.G....^
9F90:  0A 26 C7 47 04 FF FF C4  5E 0A 26 C7 47 10 FF FF   .&.G.... ^.&.G...
9FA0:  C4 5E 0A 26 C7 47 08 FF  FF C4 5E 0A 26 C7 47 14   .^.&.G.. ..^.&.G.
9FB0:  FF FF C4 5E 06 26 8A 47  05 25 10 00 D3 E8 E9 00   ...^.&.G .%......
9FC0:  00 5E 5F 8B E5 5D CB 55  8B EC 81 EC 20 00 57 56   .^_..].U .... .WV
9FD0:  C4 5E 06 26 8B 47 02 89  46 F8 C7 46 F4 00 00 FF   .^.&.G.. F..F....
9FE0:  76 0C FF 76 0A FF 76 08  FF 76 06 9A 21 00 77 09   v..v..v. .v..!.w.
9FF0:  83 C4 08 C7 46 F6 00 00  E9 03 00 FF 46 F6 C4 5E   ....F... ....F..^
A000:  06 8B 46 F6 26 39 07 7F  03 E9 CB 00 C7 46 E8 FF   ..F.&9.. .....F..
A010:  FF 8B 76 F6 D1 E6 C4 5E  06 26 8B 40 26 89 46 F2   ..v....^ .&.@&.F.
A020:  83 7E F2 FF 75 03 E9 AB  00 8D 46 FA 16 50 8D 4E   .~..u... ..F..P.N
A030:  EC 16 51 FF 76 F2 FF 76  E8 8B 56 06 8B 5E 08 81   ..Q.v..v ..V..^..
A040:  C2 B6 01 53 52 9A 50 01  77 09 83 C4 10 8B 46 F4   ...SR.P. w.....F.
A050:  8B C8 D1 E0 03 C1 D1 E0  03 46 0A 8B 56 0C 05 0A   ........ .F..V...
A060:  00 89 46 E4 89 56 E6 FF  46 F4 8D 76 EC C4 7E E4   ..F..V.. F..v..~.
A070:  A5 A5 A5 F6 46 F1 10 75  03 E9 29 00 8B 46 F4 8B   ....F..u ..)..F..
A080:  C8 D1 E0 03 C1 D1 E0 03  46 0A 8B 56 0C 05 0A 00   ........ F..V....
A090:  89 46 E0 89 56 E2 FF 46  F4 8D 76 FA C4 7E E0 A5   .F..V..F ..v..~..
A0A0:  A5 A5 FF 46 F8 FF 76 F2  8B 46 06 8B 56 08 05 B6   ...F..v. .F..V...
A0B0:  01 52 50 9A 02 00 87 08  83 C4 06 89 46 F2 B8 1A   .RP..... ....F...
A0C0:  00 F7 6E F2 8B F0 C4 5E  06 26 8B 80 C0 01 89 46   ..n....^ .&.....F
A0D0:  E8 E9 4C FF E9 24 FF 8B  46 F8 8B C8 D1 E0 03 C1   ..L..$.. F.......
A0E0:  D1 E0 05 0A 00 89 46 EA  8B 46 EA E9 00 00 5E 5F   ......F. .F....^_
A0F0:  8B E5 5D CB 55 8B EC 81  EC 42 00 57 56 9A 00 00   ..].U... .B.WV...
A100:  77 09 FF 76 08 FF 76 06  FF 76 0C FF 76 0A 9A D3   w..v..v. .v..v...
A110:  00 77 09 83 C4 08 C7 46  E2 00 00 C7 46 C2 00 00   .w.....F ....F...
A120:  E9 03 00 FF 46 C2 C4 5E  06 8B 46 C2 26 39 47 02   ....F..^ ..F.&9G.
A130:  7F 03 E9 86 00 8D 46 C6  16 50 8D 46 C8 16 50 8B   ......F. .P.F..P.
A140:  46 E2 FF 46 E2 8B C8 D1  E0 03 C1 D1 E0 03 46 0A   F..F.... ......F.
A150:  8B 56 0C 05 0A 00 52 50  9A A4 04 77 09 83 C4 0C   .V....RP ...w....
A160:  89 46 C4 83 7E C4 00 75  03 E9 2B 00 8D 46 E4 16   .F..~..u ..+..F..
A170:  50 8D 46 E6 16 50 8B 46  E2 FF 46 E2 8B C8 D1 E0   P.F..P.F ..F.....
A180:  03 C1 D1 E0 03 46 0A 8B  56 0C 05 0A 00 52 50 9A   .....F.. V....RP.
A190:  A4 04 77 09 83 C4 0C FF  76 C4 FF 76 E4 FF 76 C6   ..w..... v..v..v.
A1A0:  8D 46 E6 16 50 8D 46 C8  16 50 FF 76 08 FF 76 06   .F..P.F. .P.v..v.
A1B0:  9A 51 08 77 09 83 C4 12  E9 68 FF 5E 5F 8B E5 5D   .Q.w.... .h.^_..]
```

```
A1C0:  CB 55 8B EC 81 EC 08 00  57 56 B8 1A 00 F7 2E 96   .U...... WV......
A1D0:  04 8B F0 C4 5E 06 8B 46  0A 8B 56 0C 1E 8D B8 B6   ....^..F ..V.....
A1E0:  01 8B F0 8E DA B9 0D 00  F3 A5 1F C7 46 F8 01 00   ........ ....F...
A1F0:  C7 46 FC 01 00 83 3E 98  04 FF 75 03 E9 FF 01 B8   .F....>. ..u.....
A200:  1A 00 F7 2E 98 04 8B F0  C4 5E 06 26 F6 80 CE 01   ........ .^.&....
A210:  08 75 03 E9 69 01 B8 1A  00 F7 2E 98 04 8B F0 C4   .u..i... ........
A220:  5E 06 26 83 B8 BA 01 FF  74 03 E9 E7 00 B8 1A 00   ^.&..... t.......
A230:  F7 2E 98 04 8B F0 C4 5E  06 A1 96 04 26 89 80 BA   .......^ ....&...
A240:  01 B8 1A 00 F7 2E 98 04  8B F0 C4 5E 06 8B 46 12   ........ ...^..F.
A250:  26 89 80 BC 01 B8 1A 00  F7 2E 96 04 8B F0 C4 5E   &....... .......^
A260:  06 26 8B 80 C4 01 8B C8  B8 1A 00 F7 2E 98 04 8B   .&...... ........
A270:  F0 C4 5E 06 26 89 88 BE  01 C7 46 F8 00 00 83 7E   ..^.&... ..F....~
A280:  16 00 75 03 E9 8A 00 B8  1A 00 F7 2E 98 04 8B F0   ..u..... ........
A290:  C4 5E 06 A1 96 04 26 89  80 C6 01 B8 1A 00 F7 2E   .^....&. ........
A2A0:  98 04 8B F0 C4 5E 06 8B  46 14 26 89 80 C8 01 C4   .....^.. F.&.....
A2B0:  5E 0E 26 8B 47 0E 8B C8  B8 1A 00 F7 2E 98 04 8B   ^.&.G... ........
A2C0:  F0 C4 5E 06 26 89 88 CA  01 B8 1A 00 F7 2E 96 04   ..^.&... ........
A2D0:  8B F0 C4 5E 06 A1 98 04  26 89 80 C6 01 C4 5E 0E   ...^.... &.....^.
A2E0:  26 8B 47 0E 8B C8 B8 1A  00 F7 2E 96 04 8B F0 C4   &.G..... ........
A2F0:  5E 06 26 89 88 CA 01 C4  5E 0E 26 8B 47 0C 8B C8   ^.&..... ^.&.G...
A300:  B8 1A 00 F7 2E 96 04 8B  F0 C4 5E 06 26 89 88 C8   ........ ..^.&...
A310:  01 E9 68 00 B8 1A 00 F7  2E 98 04 8B F0 C4 5E 06   ..h..... ......^.
A320:  26 83 B8 C6 01 FF 74 03  E9 51 00 B8 1A 00 F7 2E   &.....t. .Q......
A330:  98 04 8B F0 C4 5E 06 A1  96 04 26 89 80 C6 01 B8   .....^.. ..&.....
A340:  1A 00 F7 2E 98 04 8B F0  C4 5E 06 8B 46 12 26 89   ........ .^..F.&.
A350:  80 C8 01 B8 1A 00 F7 2E  96 04 8B F0 C4 5E 06 26   ........ .....^.&
A360:  8B 80 C4 01 8B C8 B8 1A  00 F7 2E 98 04 8B F0 C4   ........ ........
A370:  5E 06 26 89 88 CA 01 C7  46 F8 00 00 E9 7F 00 B8   ^.&..... F.......
A380:  1A 00 F7 2E 98 04 8B F0  C4 5E 06 26 83 B8 BA 01   ........ .^.&....
A390:  FF 74 03 E9 68 00 B8 1A  00 F7 2E 98 04 8B F0 C4   .t..h... ........
A3A0:  5E 06 26 83 B8 C0 01 FF  74 03 E9 51 00 B8 1A 00   ^.&..... t..Q....
A3B0:  F7 2E 98 04 8B F0 C4 5E  06 A1 96 04 26 89 80 BA   .......^ ....&...
A3C0:  01 B8 1A 00 F7 2E 98 04  8B F0 C4 5E 06 8B 46 12   ........ ...^..F.
A3D0:  26 89 80 BC 01 B8 1A 00  F7 2E 96 04 8B F0 C4 5E   &....... .......^
A3E0:  06 26 8B 80 C4 01 8B C8  B8 1A 00 F7 2E 98 04 8B   .&...... ........
A3F0:  F0 C4 5E 06 26 89 88 BE  01 C7 46 F8 00 00 83 7E   ..^.&... ..F....~
A400:  F8 00 74 03 E9 08 00 C7  46 FC 00 00 E9 A3 00 83   ..t..... F.......
A410:  3E 98 04 FF 75 03 E9 99  00 B8 1A 00 F7 2E 98 04   >...u... ........
A420:  8B F0 C4 5E 06 26 8B 80  C0 01 A3 98 04 B8 1A 00   ...^.&.. ........
A430:  F7 2E 98 04 8B F0 C4 5E  06 26 83 B8 C6 01 FF 74   .......^ .&.....t
A440:  03 E9 6B 00 B8 1A 00 F7  2E 98 04 8B F0 C4 5E 06   ..k..... ......^.
A450:  26 F6 80 CE 01 08 75 03  E9 54 00 B8 1A 00 F7 2E   &.....u. .T......
A460:  98 04 8B F0 C4 5E 06 A1  96 04 26 89 80 C6 01 B8   .....^.. ..&.....
A470:  1A 00 F7 2E 98 04 8B F0  C4 5E 06 8B 46 12 26 89   ........ .^..F.&.
A480:  80 C8 01 B8 1A 00 F7 2E  96 04 8B F0 C4 5E 06 26   ........ .....^.&
A490:  8B 80 C4 01 8B C8 B8 1A  00 F7 2E 98 04 8B F0 C4   ........ ........
A4A0:  5E 06 26 89 88 CA 01 C7  46 FC 00 00 E9 03 00 E9   ^.&..... F.......
A4B0:  5D FF 83 7E FC 00 75 03  E9 2A 00 A1 96 04 FF 06   ]..~..u. .*......
A4C0:  94 04 8B 36 94 04 D1 E6  C4 5E 06 26 89 40 26 B8   ...6.... .^.&.@&.
A4D0:  1A 00 F7 2E 96 04 8B F0  C4 5E 06 26 C7 80 C0 01   ........ .^.&....
A4E0:  FF FF E9 14 00 B8 1A 00  F7 2E 96 04 8B F0 C4 5E   ........ .......^
A4F0:  06 A1 98 04 26 89 80 C0  01 B8 1A 00 F7 2E 96 04   ....&... ........
A500:  8B F0 C4 5E 06 A1 94 04  26 89 80 CC 01 A1 96 04   ...^.... &.......
A510:  FF 06 96 04 A3 98 04 5E  5F 8B E5 5D CB 55 8B EC   .......^ _..].U..
```

```
A520:  81 EC 00 00 57 56 C7 06  94 04 FF FF C7 06 96 04   ....WV.. ........
A530:  00 00 C7 06 98 04 FF FF  5E 5F 8B E5 5D CB 55 8B   ........ ^_..].U.
A540:  EC 81 EC 14 00 57 56 83  7E 06 00 75 03 E9 19 00   .....WV. ~..u....
A550:  9A 2D 04 33 0A 3D 00 00  75 03 E9 09 00 B8 00 00   .-.3.=.. u.......
A560:  BA 00 00 E9 F1 01 E9 3F  00 C7 46 EE 01 00 E9 03   .......? ..F.....
A570:  00 FF 46 EE 83 7E EE 06  7C 03 E9 2B 00 FF 76 0E   ..F..~.. |..+..v.
A580:  FF 76 0C FF 76 0A FF 76  08 FF 76 EE 9A 2D 02 33   .v..v..v ..v..-.3
A590:  0A 83 C4 0A 3D 00 00 75  03 E9 09 00 B8 00 00 BA   ....=..u ........
A5A0:  00 00 E9 B2 01 E9 C9 FF  FF 36 8C 0C FF 36 8A 0C   ........ .6...6..
A5B0:  9A 6A 1D F2 0B 83 C4 04  FF 36 8C 0C FF 36 8A 0C   .j...... .6...6..
A5C0:  8B F0 9A 6A 1D F2 0B 83  C4 04 8B C8 80 C1 08 D3   ...j.... ........
A5D0:  E6 89 76 EC FF 36 8C 0C  FF 36 8A 0C B8 04 00 50   ..v..6.. .6.....P
A5E0:  B8 02 00 50 8D 46 F6 16  50 9A 92 07 F2 0B 83 C4   ...P.F.. P.......
A5F0:  0C FF 36 8C 0C FF 36 8A  0C 9A 6A 1D F2 0B 83 C4   ..6...6. ..j.....
A600:  04 3D 0A 00 75 03 E9 03  00 E9 E5 FF 83 7E 10 00   .=..u... .....~..
A610:  75 03 E9 5B 00 8E 06 54  0B 26 FF 36 A4 01 8E 06   u..[...T .&.6....
A620:  56 0B 26 FF 36 A2 01 9A  6F 08 33 0A 83 C4 04 8E   V.&.6... o.3.....
A630:  06 58 0B 26 A3 88 6C 26  89 16 8A 6C 26 A1 8A 6C   .X.&..l& ...l&..l
A640:  26 0B 06 88 6C 74 03 E9  26 00 B8 9A 04 1E 50 9A   &...lt.. &.....P.
A650:  9C 0A F2 0B 83 C4 04 FF  36 8C 0C FF 36 8A 0C 9A   ........ 6...6...
A660:  3C 06 F2 0B 83 C4 04 B8  00 00 BA 00 00 E9 E7 00   <....... ........
A670:  2B C0 89 46 F4 89 46 F2  C7 46 EE 00 00 E9 12 00   +..F..F. .F......
A680:  FF 46 EE 8E 06 56 0B 26  A1 A2 01 99 01 46 F2 11   .F...V.& .....F..
A690:  56 F4 8E 06 54 0B 8B 46  EE 26 39 06 A4 01 7F 03   V...T..F .&9.....
A6A0:  E9 78 00 FF 36 8C 0C FF  36 8A 0C 8E 06 56 0B 26   .x..6... 6....V.&
A6B0:  FF 36 A2 01 B8 01 00 50  8B 46 F2 8B 56 F4 8E 06   .6.....P .F..V...
A6C0:  58 0B 26 03 06 88 6C 83  D2 00 B9 0C 00 D3 E2 26   X.&...l. .......&
A6D0:  03 16 8A 6C 52 50 9A 92  07 F2 0B 83 C4 0C 89 46   ...lRP.. .......F
A6E0:  F0 8E 06 56 0B 8B 46 F0  26 39 06 A2 01 7F 03 E9   ...V..F. &9......
A6F0:  26 00 FF 36 8C 0C FF 36  8A 0C 9A 3C 06 F2 0B 83   &..6...6 ...<....
A700:  C4 04 B8 AF 04 1E 50 9A  9C 0A F2 0B 83 C4 04 B8   ......P. ........
A710:  00 00 BA 00 00 E9 3F 00  E9 65 FF FF 36 8C 0C FF   ......?. .e..6...
A720:  36 8A 0C 9A 3C 06 F2 0B  83 C4 04 8E 06 56 0B 26   6...<... .....V.&
A730:  A1 A2 01 C4 5E 12 26 89  07 8E 06 54 0B 26 A1 A4   ....^.&. ...T.&..
A740:  01 C4 5E 16 26 89 07 8E  06 58 0B 26 A1 88 6C 26   ..^.&... .X.&..l&
A750:  8B 16 8A 6C E9 00 00 5E  5F 8B E5 5D CB 55 8B EC   ...l...^ _..].U..
A760:  81 EC 06 00 57 56 C7 46  FA 00 00 8B 46 06 E9 BF   ....WV.F ....F...
A770:  01 83 7E 0C 00 7D 03 E9  0A 00 81 7E 0C 00 04 7F   ..~..}.. ...~....
A780:  03 E9 15 00 FF 76 0C B8  09 05 1E 50 9A 9C 0A F2   .....v.. ...P....
A790:  0B 83 C4 06 C7 46 FA 01  00 E9 B5 01 83 7E 0E 00   .....F.. .....~..
A7A0:  7D 03 E9 0A 00 81 7E 0E  00 04 7F 03 E9 15 00 FF   }.....~. ........
A7B0:  76 0E B8 26 05 1E 50 9A  9C 0A F2 0B 83 C4 06 C7   v..&..P. ........
A7C0:  46 FA 01 00 E9 8A 01 B8  43 05 1E 50 FF 76 0A FF   F....... C..P.v..
A7D0:  76 08 9A 36 07 F2 0B 83  C4 08 A3 8A 0C 89 16 8C   v..6.... ........
A7E0:  0C A1 8C 0C 0B 06 8A 0C  74 03 E9 18 00 FF 76 0A   ........ t.....v.
A7F0:  FF 76 08 B8 46 05 1E 50  9A 9C 0A F2 0B 83 C4 08   .v..F..P ........
A800:  C7 46 FA 01 00 E9 49 01  FF 36 8C 0C FF 36 8A 0C   .F....I. .6...6..
A810:  9A 6A 1D F2 0B 83 C4 04  FF 36 8C 0C FF 36 8A 0C   .j...... .6...6..
A820:  9A 6A 1D F2 0B 83 C4 04  FF 36 8C 0C FF 36 8A 0C   .j...... .6...6..
A830:  9A 6A 1D F2 0B 83 C4 04  89 46 FE FF 36 8C 0C FF   .j...... .F..6...
A840:  36 8A 0C 9A 6A 1D F2 0B  83 C4 04 8A E0 2A C0 01   6...j... .....*..
A850:  46 FE 8E 06 56 0B 26 83  3E A2 01 00 74 03 E9 07   F...V.&. >...t...
A860:  00 8B 46 FE 26 A3 A2 01  A1 FA 04 39 46 FE 7E 03   ..F.&... ...9F.~.
A870:  E9 11 00 8E 06 56 0B 8B  46 FE 26 39 06 A2 01 75   .....V.. F.&9...u
```

```
A880:  03 E9 2E 00 8E 06 56 0B  26 FF 36 A2 01 FF 76 FE   ......V. &.6...v.
A890:  B8 59 05 1E 50 9A 9C 0A  F2 0B 83 C4 08 FF 36 8C   .Y..P... ......6.
A8A0:  0C FF 36 8A 0C 9A 3C 06  F2 0B 83 C4 04 C7 46 FA   ..6...<. ......F.
A8B0:  01 00 E9 9C 00 FF 36 8C  0C FF 36 8A 0C 9A 6A 1D   ......6. ..6...j.
A8C0:  F2 0B 83 C4 04 89 46 FC  FF 36 8C 0C FF 36 8A 0C   ......F. .6...6..
A8D0:  9A 6A 1D F2 0B 83 C4 04  8A E0 2A C0 01 46 FC 8E   .j...... ..*..F..
A8E0:  06 54 0B 26 83 3E A4 01  00 74 03 E9 07 00 8B 46   .T.&.>.. .t.....F
A8F0:  FC 26 A3 A4 01 A1 FC 04  39 46 FC 7E 03 E9 11 00   .&...... 9F.~....
A900:  8E 06 54 0B 8B 46 FC 26  39 06 A4 01 75 03 E9 19   ..T..F.& 9...u...
A910:  00 8E 06 54 0B 26 FF 36  A4 01 FF 76 FC B8 8C 05   ...T.&.6 ...v....
A920:  1E 50 9A 9C 0A F2 0B 83  C4 08 E9 24 00 E9 21 00   .P...... ...$..!.
A930:  48 75 03 E9 3B FE 48 75  03 E9 60 FE 48 75 03 E9   Hu..;.Hu ..`.Hu..
A940:  85 FE 48 75 03 E9 C0 FE  48 75 03 E9 67 FF E9 00   ..Hu.... Hu..g...
A950:  00 8B 46 FA E9 00 00 5E  5F 8B E5 5D CB 55 8B EC   ..F....^ _..].U..
A960:  81 EC 00 00 57 56 B8 00  00 E9 00 00 5E 5F 8B E5   ....WV.. ....^_..
A970:  5D CB 55 8B EC 81 EC 0A  02 57 56 B8 BC 05 1E 50   ].U..... .WV....P
A980:  FF 76 08 FF 76 06 9A 36  07 F2 0B 83 C4 08 89 46   .v..v..6 .......F
A990:  F8 89 56 FA FF 76 FA FF  76 F8 B8 BF 05 1E 50 9A   ..V..v.. v.....P.
A9A0:  EA 26 F2 0B 83 C4 08 FF  76 FA FF 76 F8 FF 76 0E   .&...... v..v..v.
A9B0:  9A 3A 1D F2 0B 83 C4 06  FF 76 FA FF 76 F8 8A 46   .:...... .v..v..F
A9C0:  0F 98 50 9A 3A 1D F2 0B  83 C4 06 FF 76 FA FF 76   ..P.:... ....v..v
A9D0:  F8 FF 76 10 9A 3A 1D F2  0B 83 C4 06 FF 76 FA FF   ..v..:.. .....v..
A9E0:  76 F8 8A 46 11 98 50 9A  3A 1D F2 0B 83 C4 06 C7   v..F..P. :.......
A9F0:  86 F6 FD 00 00 E9 04 00  FF 86 F6 FD 83 BE F6 FD   ........ ........
AA00:  0A 7C 03 E9 15 00 FF 76  FA FF 76 F8 B8 00 00 50   .|.....v ..v....P
AA10:  9A 3A 1D F2 0B 83 C4 06  E9 DD FF FF 76 FA FF 76   .:...... ....v..v
AA20:  F8 B8 20 00 50 9A 3A 1D  F2 0B 83 C4 06 FF 76 FA   .. .P.:. ......v.
AA30:  FF 76 F8 B8 0A 00 50 9A  3A 1D F2 0B 83 C4 06 8B   .v....P. :.......
AA40:  46 0A 8B 56 0C 89 46 FC  89 56 FE C7 86 F6 FD 00   F..V..F. .V......
AA50:  00 E9 04 00 FF 86 F6 FD  8B 46 10 39 86 F6 FD 7C   ........ .F.9...|
AA60:  03 E9 4A 00 FF 76 0E FF  76 FE FF 76 FC 8D 86 F8   ..J..v.. v..v....
AA70:  FD 16 50 9A 14 29 F2 0B  83 C4 0A FF 76 FA FF 76   ..P..).. ....v..v
AA80:  F8 FF 76 0E B8 01 00 50  8D 86 F8 FD 16 50 9A 04   ..v....P .....P..
AA90:  09 F2 0B 83 C4 0C 8B 46  0E 99 2B DB 8B C8 01 4E   .......F ..+....N
AAA0:  FC 13 DA B9 0C 00 D3 E3  01 5E FE E9 A6 FF FF 76   ........ .^.....v
AAB0:  FA FF 76 F8 9A 3C 06 F2  0B 83 C4 04 5E 5F 8B E5   ..v..<.. ....^_..
AAC0:  5D CB 55 8B EC 81 EC 00  00 57 56 A1 D4 04 2B 06   ].U..... .WV...+.
AAD0:  D6 04 8E 06 56 0B 26 A3  A2 01 A1 D8 04 2B 06 DA   ....V.&. .....+..
AAE0:  04 8E 06 54 0B 26 A3 A4  01 5E 5F 8B E5 5D CB 55   ...T.&.. .^_..].U
AAF0:  8B EC 81 EC 00 00 57 56  8E 06 56 0B 26 A1 A2 01   ......WV ..V.&...
AB00:  C4 5E 06 26 89 07 8E 06  54 0B 26 A1 A4 01 C4 5E   .^.&.... T.&....^
AB10:  0A 26 89 07 5E 5F 8B E5  5D CB 55 8B EC 81 EC 76   .&..^_.. ].U....v
AB20:  00 57 56 8D 7E F4 BE C2  05 8C D0 8E C0 B9 06 00   .WV.~... ........
AB30:  F3 A5 C6 46 8A 00 B8 CE  05 1E 50 8D 46 F4 16 50   ...F.... ..P.F..P
AB40:  9A 36 07 F2 0B 83 C4 08  89 46 F0 89 56 F2 0B D0   .6...... .F..V...
AB50:  75 03 E9 0D 01 80 7E 8A  21 75 03 E9 1A 00 FF 76   u.....~. !u.....v
AB60:  F2 FF 76 F0 B8 64 00 50  8D 46 8A 16 50 9A 70 26   ..v..d.P .F..P.p&
AB70:  F2 0B 83 C4 0A E9 DD FF  FF 76 08 FF 76 06 B8 D1   ........ .v..v...
AB80:  05 1E 50 8D 46 8B 16 50  9A B8 27 F2 0B 83 C4 0C   ..P.F..P ..'.....
AB90:  C7 46 EE 00 00 C4 5E 06  8B 46 EE 26 39 07 75 03   .F....^. .F.&9.u.
ABA0:  E9 72 00 C6 46 8A 00 80  7E 8A 21 75 03 E9 4B 00   .r..F... ~.!u..K.
ABB0:  FF 76 F2 FF 76 F0 B8 64  00 50 8D 46 8A 16 50 9A   .v..v..d .P.F..P.
ABC0:  70 26 F2 0B 83 C4 0A C4  5E F0 26 F6 47 0A 10 75   p&...... ^.&.G..u
ABD0:  03 E9 24 00 8D 46 F4 16  50 C4 5E 06 26 FF 37 B8   ..$..F.. P.^.&.7.
```

ENROLL.DMP Thursday, January 6, 1994 12:03pm Page 52

```
ABE0:  D5 05 1E 50 9A 9C 0A F2  0B 83 C4 0A B8 F5 FF 50   ...P.... .......P
ABF0:  9A DD 01 F2 0B 83 C4 02  E9 AC FF 8D 46 EE 16 50   ........ ....F..P
AC00:  B8 F4 05 1E 50 8D 46 8B  16 50 9A B8 27 F2 0B 83   ....P.F. .P..'...
AC10:  C4 0C E9 80 FF FF 76 20  FF 76 1E FF 76 1C FF 76   ......v  .v..v..v
AC20:  1A FF 76 18 FF 76 16 FF  76 14 FF 76 12 FF 76 10   ..v..v.. v..v..v.
AC30:  FF 76 0E FF 76 0C FF 76  0A FF 76 08 FF 76 06 B8   .v..v..v ..v..v..
AC40:  F8 05 1E 50 8D 46 8B 16  50 9A B8 27 F2 0B 83 C4   ...P.F.. P..'....
AC50:  24 FF 76 F2 FF 76 F0 9A  3C 06 F2 0B 83 C4 04 E9   $.v..v.. <.......
AC60:  1E 00 8D 46 F4 16 50 B8  14 06 1E 50 9A 9C 0A F2   ...F..P. ...P....
AC70:  0B 83 C4 08 B8 FF FF 50  9A DD 01 F2 0B 83 C4 02   .......P ........
AC80:  5E 5F 8B E5 5D CB 55 8B  EC 81 EC 02 00 57 56 8D   ^_..].U. .....WV.
AC90:  46 FE 16 50 B8 DA 04 1E  50 B8 D8 04 1E 50 B8 D6   F..P.... P....P..
ACA0:  04 1E 50 B8 D4 04 1E 50  B8 A6 01 B9 32 1F 51 50   ..P....P ....2.QP
ACB0:  B8 E2 89 B9 AE 0E 51 50  9A EA 05 33 0A 83 C4 1C   ......QP ...3....
ACC0:  9A A5 07 33 0A 9A 92 05  33 0A 9A 4D 00 99 06 5E   ...3.... 3..M...^
ACD0:  5F 8B E5 5D CB 55 8B EC  81 EC 00 00 57 56 8E 06   _..].U.. ....WV..
ACE0:  5A 0B 26 A1 E2 89 E9 42  00 B8 23 06 1E 50 B8 DC   Z.&....B ..#..P..
ACF0:  04 1E 50 9A DC 25 F2 0B  83 C4 08 E9 44 00 B8 33   ..P..%.. ....D..3
AD00:  06 1E 50 B8 DC 04 1E 50  9A DC 25 F2 0B 83 C4 08   ..P....P ..%.....
AD10:  E9 2F 00 B8 43 06 1E 50  B8 DC 04 1E 50 9A DC 25   ./..C..P ....P..%
AD20:  F2 0B 83 C4 08 E9 1A 00  E9 17 00 48 48 75 03 E9   ........ ...HHu..
AD30:  B7 FF 48 48 75 03 E9 C5  FF 48 75 03 E9 D4 FF E9   ..HHu... .Hu.....
AD40:  00 00 5E 5F 8B E5 5D CB  55 8B EC 81 EC 00 00 57   ..^_..]. U......W
AD50:  56 B8 55 06 1E 50 B8 DC  04 1E 50 9A DC 25 F2 0B   V.U..P.. ..P..%..
AD60:  83 C4 08 5E 5F 8B E5 5D  CB 55 8B EC 81 EC 00 00   ...^_..] .U......
AD70:  57 56 FF 76 08 FF 76 06  9A 6F 08 33 0A 83 C4 04   WV.v..v. .o.3....
AD80:  8E 06 58 0B 26 A3 88 6C  26 89 16 8A 6C 26 A1 88   ..X.&..l &...l&..
AD90:  6C 26 8B 16 8A 6C E9 00  00 5E 5F 8B E5 5D CB 55   l&...l.. .^_..].U
ADA0:  8B EC 81 EC 00 00 57 56  B8 01 00 50 8B 46 08 F7   ......WV ...P.F..
ADB0:  6E 06 52 50 9A 3E 28 F2  0B 83 C4 06 E9 00 00 5E   n.RP.>(. .......^
ADC0:  5F 8B E5 5D CB 55 8B EC  81 EC 00 00 57 56 8E 06   _..].U.. ....WV..
ADD0:  58 0B 26 FF 36 8A 6C 26  FF 36 88 6C 9A 32 28 F2   X.&.6.l& .6.l.2(.
ADE0:  0B 83 C4 04 5E 5F 8B E5  5D CB 55 8B EC 81 EC 12   ....^_.. ].U.....
ADF0:  00 57 56 C7 46 F2 00 00  C7 46 EE 01 00 C7 46 F8   .WV.F... .F....F.
AE00:  00 00 C7 46 FE 01 00 C7  46 FA 03 00 B8 01 00 50   ...F.... F......P
AE10:  9A 06 00 99 06 83 C4 02  C7 46 F4 00 00 E9 03 00   ........ .F......
AE20:  FF 46 F4 83 7E F4 03 7C  03 E9 F4 00 83 7E EE 00   .F..~..| .....~..
AE30:  75 03 E9 EB 00 FF 76 FA  FF 76 F8 9A 03 09 BE 0A   u.....v. .v......
AE40:  83 C4 04 89 46 FC 3D 00  00 75 03 E9 36 00 8B 46   ....F.=. .u..6..F
AE50:  FC E9 15 00 B8 FE FF E9  41 01 E9 27 00 8B 46 FC   ........ A..'..F.
AE60:  E9 38 01 E9 1E 00 E9 1B  00 2D F8 FF 7D 03 E9 EC   .8...... .-..}...
AE70:  FF 2D 04 00 7F 03 E9 DB  FF 2D 03 00 75 03 E9 D3   .-...... .-..u...
AE80:  FF E9 D9 FF FF 76 FE FF  76 F8 9A A1 09 BE 0A 83   .....v.. v.......
AE90:  C4 04 C7 46 FE 00 00 8D  46 EE 16 50 9A C1 01 BE   ...F.... F..P....
AEA0:  0A 83 C4 04 89 46 F6 83  7E EE 00 75 03 E9 6D 00   .....F.. ~..u..m.
AEB0:  C7 46 F0 01 00 8B 46 F6  89 46 F8 8B 46 F6 40 89   .F....F. .F..F.@.
AEC0:  46 FA 83 7E F4 02 7C 03  E9 3D 00 FF 76 F8 9A C6   F..~..|. .=..v...
AED0:  00 95 0B 83 C4 02 40 74  03 E9 18 00 C7 46 EE 00   ......@t .....F..
AEE0:  00 8D 46 EE 16 50 9A C1  01 BE 0A 83 C4 04 89 46   ..F..P.. .......F
AEF0:  F6 E9 11 00 FF 46 F2 FF  76 FA FF 76 F8 9A 43 0B   .....F.. v..v..C.
AF00:  BE 0A 83 C4 04 E9 15 00  C7 46 EE 00 00 8D 46 EE   ........ .F....F.
AF10:  16 50 9A C1 01 BE 0A 83  C4 04 89 46 F6 E9 00 FF   .P...... ...F....
AF20:  8B 46 F2 E9 1B 00 8E 06  5C 0B 26 FF 06 6E 00 E9   .F...... \.&..n..
AF30:  1E 00 8E 06 5E 0B 26 FF  06 70 00 E9 12 00 E9 0F   ....^.&. .p......
```

```
AF40:  00 48 75 03 E9 DF FF 48  75 03 E9 E5 FF E9 00 00   .Hu....H u.......
AF50:  B8 DE F8 B9 AE 0E 51 50  FF 76 F6 9A 72 01 95 0B   ......QP .v..r...
AF60:  83 C4 06 B8 03 00 50 B8  00 00 50 9A 43 0B BE 0A   ......P. ..P.C...
AF70:  83 C4 04 B8 00 00 50 9A  06 00 99 06 83 C4 02 83   ......P. ........
AF80:  7E F6 FF 74 03 E9 08 00  C7 46 FC FD FF E9 05 00   ~..t.... .F......
AF90:  C7 46 FC 00 00 8B 46 FC  E9 00 00 5E 5F 8B E5 5D   .F....F. ...^_..]
AFA0:  CB 55 8B EC 81 EC 3C 00  57 56 C7 46 FC 03 00 2B   .U....<. WV.F...+
AFB0:  C0 89 46 E8 89 46 E6 2B  C0 89 46 EC 89 46 EA 2B   ..F..F.+ ..F..F.+
AFC0:  C0 89 46 F0 89 46 EE 2B  C0 89 46 F4 89 46 F2 2B   ..F..F.+ ..F..F.+
AFD0:  C0 89 46 F8 89 46 F6 8D  7E CE 8D 76 E6 8C D0 8E   ..F..F.. ~..v....
AFE0:  C0 B9 0A 00 F3 A5 9A 20  00 99 06 89 46 CA 8B 46   .......  ....F..F
AFF0:  CA 89 46 FA C7 46 C6 FF  FF C7 46 C8 00 00 C7 46   ..F..F.. ..F....F
B000:  E2 00 00 E9 03 00 FF 46  E2 83 7E E2 03 7C 03 E9   .......F ..~..|..
B010:  F1 00 B8 00 00 89 46 C4  89 46 E4 89 46 FE C7 46   ......F. .F..F..F
B020:  CC 00 00 E9 03 00 FF 46  CC 83 7E CC 03 7C 03 E9   .......F ..~..|..
B030:  50 00 8E 06 60 0B 8B 5E  E2 8B C3 D1 E3 03 D8 03   P...`..^ ........
B040:  5E CC 8B C3 D1 E3 03 D8  D1 E3 D1 E3 26 81 BF 9A   ^....... ....&...
B050:  EF 18 FC 7F 03 E9 24 00  FF 46 E4 8B 5E E2 8B C3   ......$. .F..^...
B060:  D1 E3 03 D8 03 5E CC 8B  C3 D1 E3 03 D8 D1 E3 D1   .....^.. ........
B070:  E3 26 8B 87 9A EF 01 46  FE E9 03 00 FF 46 C4 E9   .&.....F .....F..
B080:  A4 FF 83 7E C4 03 74 03  E9 12 00 C4 5E 06 26 83   ...~..t. ....^.&.
B090:  3F 00 75 03 E9 06 00 8B  46 E2 E9 86 04 83 7E E4   ?.u..... F.....~.
B0A0:  00 75 03 E9 0A 00 8B 46  FE 99 F7 7E E4 E9 03 00   .u.....F ...~....
B0B0:  B8 18 FC 8B C8 B8 2E 00  F7 6E E2 8B D8 8E 06 62   ........ .n.....b
B0C0:  0B 26 89 8F E6 F8 83 7E  E4 01 7F 03 E9 31 00 B8   .&.....~ .....1..
B0D0:  2E 00 F7 6E E2 8B D8 8B  46 FA 26 39 87 E6 F8 7F   ...n.... F.&9....
B0E0:  03 E9 1C 00 B8 2E 00 F7  6E E2 8B D8 26 8B 87 E6   ........ n...&...
B0F0:  F8 89 46 FA 8B 46 E4 89  46 C8 8B 46 E2 89 46 C6   ..F..F.. F..F..F.
B100:  E9 03 FF C4 5E 06 26 C7  07 00 00 83 7E C8 01 7F   ....^.&. ....~...
B110:  03 E9 09 04 8B 46 CA 39  46 FA 7F 03 E9 FE 03 C7   .....F.9 F.......
B120:  46 E4 00 00 C7 46 CC 00  00 E9 03 00 FF 46 CC 83   F....F.. .....F..
B130:  7E CC 03 7C 03 E9 DD 00  8E 06 60 0B 8B 5E C6 8B   ~..|.... ..`..^..
B140:  C3 D1 E3 03 D8 03 5E CC  8B C3 D1 E3 03 D8 D1 E3   ......^. ........
B150:  D1 E3 26 81 BF 9A EF 18  FC 74 03 E9 03 00 E9 CB   ..&..... .t......
B160:  FF FF 46 E4 8E 06 60 0B  8B 5E C6 8B C3 D1 E3 03   ..F...`. .^......
B170:  D8 03 5E CC 8B C3 D1 E3  03 D8 D1 E3 D1 E3 26 8B   ..^..... ......&.
B180:  87 9C EF 99 01 46 E6 11  56 E8 8B 5E C6 8B C3 D1   .....F.. V..^....
B190:  E3 03 D8 03 5E CC 8B C3  D1 E3 03 D8 D1 E3 D1 E3   ....^... ........
B1A0:  26 8B 87 9E EF 99 01 46  EA 11 56 EC 8B 5E C6 8B   &......F ..V..^..
B1B0:  C3 D1 E3 03 D8 03 5E CC  8B C3 D1 E3 03 D8 D1 E3   ......^. ........
B1C0:  D1 E3 26 8B 87 A0 EF 99  01 46 EE 11 56 F0 8B 5E   ..&..... .F..V..^
B1D0:  C6 8B C3 D1 E3 03 D8 03  5E CC 8B C3 D1 E3 03 D8   ........ ^.......
B1E0:  D1 E3 D1 E3 26 8B 87 A2  EF 99 01 46 F2 11 56 F4   ....&... ...F..V.
B1F0:  8B 5E C6 8B C3 D1 E3 03  D8 03 5E CC 8B C3 D1 E3   .^...... ..^.....
B200:  03 D8 D1 E3 D1 E3 26 8B  87 A4 EF 99 01 46 F6 11   ......&. .....F..
B210:  56 F8 E9 17 FF 8B 46 E4  99 52 50 FF 76 E8 FF 76   V.....F. .RP.v..v
B220:  E6 9A 94 2A F2 0B 8B C8  B8 2E 00 F7 6E C6 8B D8   ...*.... ....n...
B230:  8E 06 62 0B 26 89 8F E8  F8 8B 46 E4 99 52 50 FF   ..b.&... ..F..RP.
B240:  76 EC FF 76 EA 9A 94 2A  F2 0B 8B C8 B8 2E 00 8B   v..v...* ........
B250:  DA F7 6E C6 8B F0 8E 06  62 0B 26 89 8C EA F8 8B   ..n..... b.&.....
B260:  46 E4 99 52 50 FF 76 F0  FF 76 EE 9A 94 2A F2 0B   F..RP.v. .v...*..
B270:  8B C8 B8 2E 00 8B DA F7  6E C6 8B F0 8E 06 62 0B   ........ n.....b.
B280:  26 89 8C EC F8 8B 46 E4  99 52 50 FF 76 F4 FF 76   &.....F. .RP.v..v
B290:  F2 9A 94 2A F2 0B 8B C8  B8 2E 00 8B DA F7 6E C6   ...*.... ......n.
```

```
B2A0:  8B F0 8E 06 62 0B 26 89  8C EE F8 8B 46 E4 99 52   ....b.&. ....F..R
B2B0:  50 FF 76 F8 FF 76 F6 9A  94 2A F2 0B 8B C8 B8 2E   P.v..v.. .*......
B2C0:  00 8B DA F7 6E C6 8B F0  8E 06 62 0B 26 89 8C F0   ....n... ..b.&...
B2D0:  F8 C7 46 CC 00 00 E9 03  00 FF 46 CC 83 7E CC 03   ..F..... ..F..~..
B2E0:  7C 03 E9 76 01 8E 06 60  0B 8B 5E C6 8B C3 D1 E3   |..v...` ..^.....
B2F0:  03 D8 03 5E CC 8B C3 D1  E3 03 D8 D1 E3 D1 E3 26   ...^.... .......&
B300:  81 BF 9A EF 18 FC 74 03  E9 03 00 E9 CB FF 8E 06   ......t. ........
B310:  60 0B 8B 5E C6 8B C3 D1  E3 03 D8 03 5E CC 8B C3   `..^.... ....^...
B320:  D1 E3 03 D8 D1 E3 D1 E3  26 8B 87 9C EF 8B C8 B8   ........ &.......
B330:  2E 00 F7 6E C6 8B D8 8E  06 62 0B 26 2B 8F E8 F8   ...n.... .b.&+...
B340:  51 9A 1E 2A F2 0B 83 C4  02 99 01 46 CE 11 56 D0   Q..*.... ...F..V.
B350:  8E 06 60 0B 8B 5E C6 8B  C3 D1 E3 03 D8 03 5E CC   ..`..^.. ......^.
B360:  8B C3 D1 E3 03 D8 D1 E3  D1 E3 26 8B 87 9E EF 8B   ........ ..&.....
B370:  C8 B8 2E 00 F7 6E C6 8B  D8 8E 06 62 0B 26 2B 8F   .....n.. ...b.&+.
B380:  EA F8 51 9A 1E 2A F2 0B  83 C4 02 99 01 46 D2 11   ..Q..*.. .....F..
B390:  56 D4 8E 06 60 0B 8B 5E  C6 8B C3 D1 E3 03 D8 03   V...`..^ ........
B3A0:  5E CC 8B C3 D1 E3 03 D8  D1 E3 D1 E3 26 8B 87 A0   ^....... ....&...
B3B0:  EF 8B C8 B8 2E 00 F7 6E  C6 8B D8 8E 06 62 0B 26   .......n .....b.&
B3C0:  2B 8F EC F8 51 9A 1E 2A  F2 0B 83 C4 02 99 01 46   +...Q..* .......F
B3D0:  D6 11 56 D8 8E 06 60 0B  8B 5E C6 8B C3 D1 E3 03   ..V...`. .^......
B3E0:  D8 03 5E CC 8B C3 D1 E3  03 D8 D1 E3 D1 E3 26 8B   ..^..... ......&.
B3F0:  87 A2 EF 8B C8 B8 2E 00  F7 6E C6 8B D8 8E 06 62   ........ .n.....b
B400:  0B 26 2B 8F EE F8 51 9A  1E 2A F2 0B 83 C4 02 99   .&+...Q. .*......
B410:  01 46 DA 11 56 DC 8E 06  60 0B 8B 5E C6 8B C3 D1   .F..V... `..^....
B420:  E3 03 D8 03 5E CC 8B C3  D1 E3 03 D8 D1 E3 D1 E3   ....^... ........
B430:  26 8B 87 A4 EF 8B C8 B8  2E 00 F7 6E C6 8B D8 8E   &....... ...n....
B440:  06 62 0B 26 2B 8F F0 F8  51 9A 1E 2A F2 0B 83 C4   .b.&+... Q..*....
B450:  02 99 01 46 DE 11 56 E0  E9 7E FE 8B 46 E4 99 52   ...F..V. .~..F..R
B460:  50 FF 76 D0 FF 76 CE 9A  94 2A F2 0B 8B C8 B8 2E   P.v..v.. .*......
B470:  00 F7 6E C6 8B D8 8E 06  62 0B 26 89 8F F4 F8 8B   ..n..... b.&.....
B480:  46 E4 99 52 50 FF 76 D4  FF 76 D2 9A 94 2A F2 0B   F..RP.v. .v...*..
B490:  8B C8 B8 2E 00 8B DA F7  6E C6 8B F0 8E 06 62 0B   ........ n.....b.
B4A0:  26 89 8C F6 F8 8B 46 E4  99 52 50 FF 76 D8 FF 76   &.....F. .RP.v..v
B4B0:  D6 9A 94 2A F2 0B 8B C8  B8 2E 00 8B DA F7 6E C6   ...*.... ......n.
B4C0:  8B F0 8E 06 62 0B 26 89  8C F8 F8 8B 46 E4 99 52   ....b.&. ....F..R
B4D0:  50 FF 76 DC FF 76 DA 9A  94 2A F2 0B 8B C8 B8 2E   P.v..v.. .*......
B4E0:  00 8B DA F7 6E C6 8B F0  8E 06 62 0B 26 89 8C FA   ....n... ..b.&...
B4F0:  F8 8B 46 E4 99 52 50 FF  76 E0 FF 76 DE 9A 94 2A   ..F..RP. v..v...*
B500:  F2 0B 8B C8 B8 2E 00 8B  DA F7 6E C6 8B F0 8E 06   ........ ..n.....
B510:  62 0B 26 89 8C FC F8 8B  46 C6 E9 06 00 B8 FF FF   b.&..... F.......
B520:  E9 00 00 5E 5F 8B E5 5D  CB 55 8B EC 81 EC 04 00   ...^_..] .U......
B530:  57 56 FF 76 06 9A 02 00  95 0B 83 C4 02 89 46 FE   WV.v.... ......F.
B540:  3D 00 00 7C 03 E9 06 00  8B 46 FE E9 8F 01 B8 AE   =..|.... .F......
B550:  0E 8B C8 B8 2E 00 F7 6E  06 8B D8 8E 06 62 0B 51   .......n .....b.Q
B560:  06 1E 8D BF DE F8 BE E4  89 8E D9 B9 13 00 F3 A5   ........ ........
B570:  1F 07 59 B8 1A 00 50 8E  C1 26 FF 36 E6 89 9A 04   ..Y...P. .&.6....
B580:  28 F2 0B 83 C4 04 8B C8  B8 2E 00 8B DA F7 6E 06   (....... ......n.
B590:  8B F0 8E 06 62 0B 26 89  8C 08 F9 26 89 9C 0A F9   ....b.&. ...&....
B5A0:  B8 2E 00 F7 6E 06 8B D8  26 8B 87 0A F9 26 0B 87   ....n... &....&..
B5B0:  08 F9 74 03 E9 06 00 B8  FF FF E9 20 01 B8 02 00   ..t..... ... ....
B5C0:  50 8E 06 64 0B 26 FF 36  E4 89 9A 04 28 F2 0B 83   P..d.&.6 ....(...
B5D0:  C4 04 8B C8 B8 2E 00 8B  DA F7 6E 06 8B F0 8E 06   ........ ..n.....
B5E0:  62 0B 26 89 8C 04 F9 26  89 9C 06 F9 B8 2E 00 F7   b.&....& ........
B5F0:  6E 06 8B D8 26 8B 87 06  F9 26 0B 87 04 F9 74 03   n...&... .&....t.
```

```
B600:  E9 38 00 B8 2E 00 F7 6E  06 8B D8 26 FF B7 0A F9   .8.....n ...&....
B610:  26 FF B7 08 F9 9A D6 22  F2 0B 83 C4 04 B8 2E 00   &......" ........
B620:  F7 6E 06 8B D8 8E 06 62  0B 2B C0 26 89 87 0A F9   .n.....b .+.&....
B630:  26 89 87 08 F9 B8 FF FF  E9 A2 00 8E 06 64 0B 26   &....... .....d.&
B640:  A1 E4 89 D1 E0 50 B8 0A  8A 06 50 B8 2E 00 F7 6E   .....P.. ..P....n
B650:  06 8B D8 8E 06 62 0B 26  FF B7 06 F9 26 FF B7 04   .....b.& ....&...
B660:  F9 9A 14 29 F2 0B 83 C4  0A B8 1A 00 8E 06 64 0B   ...).... ......d.
B670:  26 F7 2E E6 89 50 B8 9A  8B 06 50 B8 2E 00 F7 6E   &....P.. ..P....n
B680:  06 8B D8 8E 06 62 0B 26  FF B7 0A F9 26 FF B7 08   .....b.& ....&...
B690:  F9 9A 14 29 F2 0B 83 C4  0A C7 46 FC 00 00 E9 03   ...).... ..F.....
B6A0:  00 FF 46 FC 8E 06 64 0B  8B 46 FC 26 39 06 E6 89   ..F...d. .F.&9...
B6B0:  7F 03 E9 22 00 B8 1A 00  F7 6E FC 8B D8 B8 2E 00   ..."....  .n......
B6C0:  F7 6E 06 8B F0 8E 06 62  0B 26 C4 B4 08 F9 26 81   .n.....b .&....&.
B6D0:  60 18 7F FF E9 CA FF B8  00 00 E9 00 00 5E 5F 8B   `....... .....^_.
B6E0:  E5 5D CB 55 8B EC 81 EC  06 00 57 56 C7 46 FA 00   .].U.... ..WV.F..
B6F0:  00 8B 46 06 89 46 FC E9  03 00 FF 46 FC 8B 46 08   ..F..F.. ...F..F.
B700:  39 46 FC 7C 03 E9 6D 00  FF 76 FC 9A 49 07 BE 0A   9F.|..m. .v..I...
B710:  83 C4 02 89 46 FE 83 7E  FE 00 75 03 E9 53 00 83   ....F..~ ..u..S..
B720:  7E FA 04 75 03 E9 09 00  83 7E FE FF 74 03 E9 05   ~..u.... .~..t...
B730:  00 C7 46 FE FD FF 83 7E  FA 04 75 03 E9 24 00 83   ..F....~ ..u..$..
B740:  7E FE F7 75 03 E9 1B 00  83 7E FE FF 75 03 E9 12   ~..u.... .~..u...
B750:  00 83 7E FE F5 75 03 E9  09 00 83 7E FE F4 74 03   ..~..u.. ...~..t.
B760:  E9 09 00 8B 46 FE E9 12  00 E9 06 00 FF 46 FA FF   ....F... .....F..
B770:  4E FC E9 85 FF B8 00 00  E9 00 00 5E 5F 8B E5 5D   N....... ...^_..]
B780:  CB 55 8B EC 81 EC 0E 00  57 56 C7 46 F6 00 00 E9   .U...... WV.F....
B790:  03 00 FF 46 F6 83 7E F6  03 7C 03 E9 7F 01 8B 46   ...F..~. .|.....F
B7A0:  F6 89 46 F8 E9 03 00 FF  46 F8 83 7E F8 03 7C 03   ..F..... F..~..|.
B7B0:  E9 67 01 8B 46 F6 39 46  F8 74 03 E9 16 00 B8 30   .g..F.9F .t.....0
B7C0:  00 F7 6E F8 8B D8 8E 06  60 0B 26 C7 87 9A EF 18   ..n..... `.&.....
B7D0:  FC E9 D3 FF 83 7E 08 00  74 03 E9 19 00 8B 46 06   .....~.. t.....F.
B7E0:  39 46 F6 75 03 E9 0E 00  8B 46 06 39 46 F8 75 03   9F.u.... .F.9F.u.
B7F0:  E9 03 00 E9 B1 FF B8 8E  00 B9 AE 0E 51 50 FF 76   ........ ....QP.v
B800:  F6 9A D4 0B BE 0A 83 C4  06 B8 E4 89 B9 AE 0E 51   ........ .......Q
B810:  50 FF 76 F8 9A D4 0B BE  0A 83 C4 06 9A 02 00 25   P.v..... .......%
B820:  00 89 46 FC B8 AE 0E 8B  5E F8 8B CB D1 E3 03 D9   ..F..... ^.......
B830:  03 5E F6 8B CB D1 E3 03  D9 D1 E3 D1 E3 8E 06 60   .^...... .......`
B840:  0B 06 1E 8D BF 9A EF BE  D6 89 8E D8 B9 06 00 F3   ........ ........
B850:  A5 1F 07 8B 4E F8 8B D1  D1 E1 03 CA 03 4E F6 8B   ....N... .....N..
B860:  D1 D1 E1 03 CA D1 E1 D1  E1 81 C1 9A EF 89 4E F2   ........ ......N.
B870:  8C 46 F4 8B 4E F2 8B 56  F4 8B 5E F6 8B F3 D1 E3   .F..N..V ..^.....
B880:  03 DE 03 5E F8 8B F3 D1  E3 03 DE D1 E3 D1 E3 1E   ...^.... ........
B890:  8D BF 9A EF 8B F1 8E DA  B9 06 00 F3 A5 1F 8E C0   ........ ........
B8A0:  26 83 3E 9C 89 00 7F 03  E9 26 00 B8 8E 00 B9 AE   &.>..... .&......
B8B0:  0E 51 50 FF 76 F6 9A 70  0C BE 0A 83 C4 06 B8 E4   .QP.v..p ........
B8C0:  89 B9 AE 0E 51 50 FF 76  F8 9A 70 0C BE 0A 83 C4   ....QP.v ..p.....
B8D0:  06 83 7E FC FF 74 03 E9  3D 00 B8 18 FC 8E 06 60   ..~..t.. =......`
B8E0:  0B 8B 5E F8 8B CB D1 E3  03 D9 03 5E F6 8B CB D1   ..^..... ...^....
B8F0:  E3 03 D9 D1 E3 D1 E3 26  89 87 9A EF 8B 5E F6 8B   .......& .....^..
B900:  CB D1 E3 03 D9 03 5E F8  8B CB D1 E3 03 D9 D1 E3   ......^. ........
B910:  D1 E3 26 89 87 9A EF E9  8D FE E9 75 FE 5E 5F 8B   ..&..... ...u.^_.
B920:  E5 5D CB 55 8B EC 81 EC  02 00 57 56 8B 46 06 89   .].U.... ..WV.F..
B930:  46 FE E9 03 00 FF 46 FE  8B 46 08 39 46 FE 7C 03   F.....F. .F.9F.|.
B940:  E9 6B 00 B8 2E 00 F7 6E  FE 8B D8 8E 06 62 0B 26   .k.....n .....b.&
B950:  FF B7 0A F9 26 FF B7 08  F9 9A D6 22 F2 0B 83 C4   ....&... ..."....
```

```
B960:  04 B8 2E 00 F7 6E FE 8B  D8 8E 06 62 0B 2B C0 26   .....n.. ...b.+.&
B970:  89 87 0A F9 26 89 87 08  F9 B8 2E 00 F7 6E FE 8B   ....&... .....n..
B980:  D8 26 FF B7 06 F9 26 FF  B7 04 F9 9A D6 22 F2 0B   .&....&. ....."..
B990:  83 C4 04 B8 2E 00 F7 6E  FE 8B D8 8E 06 62 0B 2B   .......n ....b.+
B9A0:  C0 26 89 87 06 F9 26 89  87 04 F9 E9 87 FF 5E 5F   .&....&. ......^_
B9B0:  8B E5 5D CB 55 8B EC 81  EC 00 00 57 56 B8 2E 00   ..].U... ...WV...
B9C0:  F7 6E 06 05 DE F8 B9 AE  0E 51 1E 8B F0 8E D9 C4   .n...... .Q......
B9D0:  7E 08 B9 13 00 F3 A5 1F  59 B8 2E 00 F7 6E 06 8B   ~....... Y....n..
B9E0:  D8 8E C1 26 8B 87 DE F8  D1 E0 50 B8 2E 00 F7 6E   ...&.... ..P....n
B9F0:  06 8B D8 26 FF B7 06 F9  26 FF B7 04 F9 8B 46 08   ...&.... &.....F.
BA00:  8B 56 0A 05 26 00 52 50  9A 14 29 F2 0B 83 C4 0A   .V..&.RP ..).....
BA10:  B8 2E 00 F7 6E 06 8B D8  8E 06 62 0B B8 1A 00 26   ....n... ..b....&
BA20:  F7 AF E0 F8 50 B8 2E 00  F7 6E 06 8B D8 26 FF B7   ....P... .n...&..
BA30:  0A F9 26 FF B7 08 F9 8B  46 08 8B 56 0A 05 B6 01   ..&..... F..V....
BA40:  52 50 9A 14 29 F2 0B 83  C4 0A 5E 5F 8B E5 5D CB   RP..)... ..^_..].
BA50:  55 8B EC 81 EC 02 00 57  56 C7 46 FE 00 00 E9 03   U......W V.F.....
BA60:  00 FF 46 FE C4 5E 08 8B  46 FE 26 39 47 02 7F 03   ..F..^.. F.&9G...
BA70:  E9 3B 00 B8 1A 00 F7 6E  FE 8B F0 C4 5E 08 26 8A   .;.....n ....^.&.
BA80:  80 CE 01 24 06 3C 00 77  03 E9 1F 00 B8 1A 00 F7   ...$.<.w ........
BA90:  6E FE 8B D8 B8 2E 00 F7  6E 06 8B F0 8E 06 62 0B   n....... n.....b.
BAA0:  26 C4 B4 08 F9 26 81 48  18 80 00 E9 B3 FF 5E 5F   &....&.H ......^_
BAB0:  8B E5 5D CB 55 8B EC 81  EC 02 00 57 56 C7 46 FE   ..].U... ...WV.F.
BAC0:  00 00 E9 03 00 FF 46 FE  B8 2E 00 F7 6E 06 8B D8   ......F. ....n...
BAD0:  8E 06 62 0B 8B 46 FE 26  39 87 E0 F8 7F 03 E9 6B   ..b..F.& 9......k
BAE0:  00 B8 1A 00 F7 6E FE 8B  D8 B8 2E 00 F7 6E 06 8B   .....n.. .....n..
BAF0:  F0 26 C4 B4 08 F9 B8 1A  00 F7 6E FE 8B CB 8B D8   .&...... ..n.....
BB00:  B8 2E 00 F7 6E 06 8B F8  8C C0 8B D3 8B D9 8E C0   ....n... ........
BB10:  26 8B 40 18 B1 03 D3 E8  8E 06 62 0B 26 C4 B5 08   &.@..... ..b.&...
BB20:  F9 8B DA 26 32 40 18 25  10 00 8B C8 B8 1A 00 F7   ...&2@.% ........
BB30:  6E FE 8B D8 B8 2E 00 F7  6E 06 8B F0 8E 06 62 0B   n....... n.....b.
BB40:  26 C4 B4 08 F9 26 31 48  18 E9 79 FF 5E 5F 8B E5   &....&1H ..y.^_..
BB50:  5D CB 55 8B EC 81 EC 50  00 57 56 8E 06 66 0B 8B   ].U....P .WV..f..
BB60:  5E 06 D1 E3 D1 E3 26 8B  87 8C 6C 26 8B 97 8E 6C   ^.....&. ..l&...l
BB70:  89 46 B6 89 56 B8 83 7E  B6 FF 74 03 E9 0F 00 83   .F..V..~ ..t.....
BB80:  7E B8 FF 74 03 E9 06 00  B8 FF FF E9 58 00 B8 00   ~..t.... ....X...
BB90:  00 50 8D 46 B0 16 50 FF  76 B8 FF 76 B6 9A 8A 01   .P.F..P. v..v....
BBA0:  00 00 83 C4 0A 40 74 03  E9 06 00 B8 FF FF E9 35   .....@t. .......5
BBB0:  00 B8 00 00 50 8A 46 B4  98 2D 30 00 50 B8 E4 89   ....P.F. .-0.P...
BBC0:  B9 AE 0E 51 50 8D 46 B0  16 50 9A C0 01 00 00 83   ...QP.F. .P......
BBD0:  C4 0C 3D 00 00 75 03 E9  06 00 B8 FF FF E9 06 00   ..=..u.. ........
BBE0:  B8 00 00 E9 00 00 5E 5F  8B E5 5D CB 55 8B EC 81   ......^_ ..].U...
BBF0:  EC 3A 00 57 56 B8 DC 04  B9 32 1F 51 50 8D 46 CE   .:.WV... .2.QP.F.
BC00:  16 50 9A DC 25 F2 0B 83  C4 08 B8 00 00 E9 00 00   .P..%... ........
BC10:  5E 5F 8B E5 5D CB 55 8B  EC 81 EC 02 00 57 56 C7   ^_..].U. .....WV.
BC20:  46 FE 00 00 E9 03 00 FF  46 FE 8E 06 68 0B 8B 5E   F....... F...h..^
BC30:  FE D1 E3 D1 E3 26 8B 87  98 F1 26 0B 87 96 F1 75   .....&.. ..&....u
BC40:  03 E9 65 00 8B 5E FE D1  E3 D1 E3 26 83 BF 96 F1   ..e..^.. ...&....
BC50:  FF 74 03 E9 0B 00 26 83  BF 98 F1 FF 75 03 E9 45   .t....&. ....u..E
BC60:  00 8B 5E FE D1 E3 D1 E3  26 8B 87 96 F1 26 8B 97   ..^..... &....&..
BC70:  98 F1 8E 06 66 0B 8B 5E  06 D1 E3 D1 E3 26 89 87   ....f..^ .....&..
BC80:  8C 6C 26 89 97 8E 6C 8E  06 68 0B 8B 5E FE D1 E3   .l&...l. .h..^...
BC90:  D1 E3 26 C7 87 96 F1 FF  FF 26 C7 87 98 F1 FF FF   ..&..... .&......
BCA0:  B8 00 00 E9 16 00 E9 7E  FF B8 5E 06 1E 50 9A 9C   .......~ ..^..P..
BCB0:  0A F2 0B 83 C4 04 B8 FF  FF E9 00 00 5E 5F 8B E5   ........ ....^_..
```

```
BCC0:  5D CB 55 8B EC 81 EC 28  00 57 56 83 7E 06 00 7D   ].U....( .WV.~..}
BCD0:  03 E9 29 00 B8 00 00 50  8D 46 F8 16 50 8E 06 66   ..)....P .F..P..f
BCE0:  0B 8B 5E 06 D1 E3 D1 E3  26 FF B7 8E 6C 26 FF B7   ..^..... &...l&..
BCF0:  8C 6C 9A 8A 01 00 00 83  C4 0A E9 1F 00 B8 00 00   .l...... ........
BD00:  50 8D 46 F8 16 50 8E 06  66 0B 26 FF 36 8E 6C 26   P.F..P.. f.&.6.l&
BD10:  FF 36 8C 6C 9A 8A 01 00  00 83 C4 0A 83 7E 06 FF   .6.l.... ......~..
BD20:  75 03 E9 1C 00 8A 46 FD  88 46 E8 B8 8E 00 B9 AE   u.....F. .F......
BD30:  0E 51 50 FF 76 06 9A D4  0B BE 0A 83 C4 06 E9 17   .QP.v... ........
BD40:  00 B8 6F 06 1E 50 8D 46  E8 16 50 9A DC 25 F2 0B   ..o..P.F ..P..%..
BD50:  83 C4 08 C7 46 E6 FD FF  8D 46 F8 16 50 9A 3C 26   ....F... .F..P.<&
BD60:  F2 0B 83 C4 04 8B F0 C6  42 F7 00 B8 8E 00 B9 AE   ........ B.......
BD70:  0E 51 50 8D 46 F8 16 50  9A 6A 02 B8 0B 83 C4 08   .QP.F..P .j......
BD80:  5E 5F 8B E5 5D CB 55 8B  EC 81 EC 00 00 57 56 FF   ^_..].U. .....WV.
BD90:  36 94 0C FF 36 92 0C B8  01 00 50 B9 02 00 51 FF   6...6... ..P...Q.
BDA0:  76 08 FF 76 06 9A 04 09  F2 0B 83 C4 0C FF 36 94   v..v.... ......6.
BDB0:  0C FF 36 92 0C B8 01 00  50 B9 02 00 51 8B 56 06   ..6..... P...Q.V.
BDC0:  8B 5E 08 83 C2 02 53 52  9A 04 09 F2 0B 83 C4 0C   .^....SR ........
BDD0:  FF 36 94 0C FF 36 92 0C  B8 01 00 50 B8 02 00 50   .6...6.. ...P...P
BDE0:  8B 46 06 8B 56 08 05 04  00 52 50 9A 04 09 F2 0B   .F..V... .RP.....
BDF0:  83 C4 0C 5E 5F 8B E5 5D  CB 55 8B EC 81 EC 00 00   ...^_..] .U......
BE00:  57 56 FF 36 94 0C FF 36  92 0C B8 01 00 50 B9 02   WV.6...6 .....P..
BE10:  00 51 FF 76 08 FF 76 06  9A 04 09 F2 0B 83 C4 0C   .Q.v..v. ........
BE20:  FF 36 94 0C FF 36 92 0C  B8 01 00 50 B8 04 00 50   .6...6.. ...P...P
BE30:  8B 46 06 8B 56 08 05 02  00 52 50 9A 04 09 F2 0B   .F..V... .RP.....
BE40:  83 C4 0C B8 00 00 E9 00  00 5E 5F 8B E5 5D CB 55   ........ .^_..].U
BE50:  8B EC 81 EC 1C 00 57 56  9A 00 00 77 09 FF 76 08   ......WV ...w..v.
BE60:  FF 76 06 9A 06 00 B8 0B  83 C4 04 C7 46 E4 00 00   .v...... ....F...
BE70:  E9 03 00 FF 46 E4 B1 07  C4 5E 06 26 8B 07 D3 E8   ....F... .^.&....
BE80:  3B 46 E4 77 03 E9 21 00  8B 46 E4 8B C8 D1 E0 03   ;F.w..!. .F......
BE90:  C1 D1 E0 03 46 06 8B 56  08 05 0A 00 52 50 9A 79   ....F..V ....RP.y
BEA0:  00 B8 0B 83 C4 04 E9 CA  FF B8 00 00 E9 00 00 5E   ........ .......^
BEB0:  5F 8B E5 5D CB 55 8B EC  81 EC 1C 00 57 56 9A 00   _..].U.. ....WV..
BEC0:  00 77 09 FF 76 08 FF 76  06 9A 9B 01 B8 0B 83 C4   .w..v..v ........
BED0:  04 C7 46 E4 00 00 E9 03  00 FF 46 E4 B1 07 C4 5E   ..F..... ..F....^
BEE0:  06 26 8B 07 D3 E8 3B 46  E4 77 03 E9 21 00 8B 46   .&....;F .w..!..F
BEF0:  E4 8B C8 D1 E0 03 C1 D1  E0 03 46 06 8B 56 08 05   ........ ..F..V..
BF00:  0A 00 52 50 9A 14 02 B8  0B 83 C4 04 E9 CA FF B8   ..RP.... ........
BF10:  00 00 E9 00 00 5E 5F 8B  E5 5D CB 55 8B EC 81 EC   .....^_. .].U....
BF20:  00 00 57 56 FF 36 94 0C  FF 36 92 0C B8 01 00 50   ..WV.6.. .6.....P
BF30:  B9 02 00 51 FF 76 08 FF  76 06 9A 92 07 F2 0B 83   ...Q.v.. v.......
BF40:  C4 0C FF 36 94 0C FF 36  92 0C B8 01 00 50 B9 02   ...6...6 .....P..
BF50:  00 51 8B 56 06 8B 5E 08  83 C2 02 53 52 9A 92 07   .Q.V..^. ...SR...
BF60:  F2 0B 83 C4 0C FF 36 94  0C FF 36 92 0C B8 01 00   ......6. ..6.....
BF70:  50 B8 02 00 50 8B 46 06  8B 56 08 05 04 00 52 50   P...P.F. .V....RP
BF80:  9A 92 07 F2 0B 83 C4 0C  B8 00 00 E9 00 00 5E 5F   ........ ......^_
BF90:  8B E5 5D CB 55 8B EC 81  EC 00 00 57 56 FF 36 94   ..].U... ...WV.6.
BFA0:  0C FF 36 92 0C B8 01 00  50 B9 02 00 51 FF 76 08   ..6..... P...Q.v.
BFB0:  FF 76 06 9A 92 07 F2 0B  83 C4 0C FF 36 94 0C FF   .v...... ....6...
BFC0:  36 92 0C B8 01 00 50 B8  04 00 50 8B 46 06 8B 56   6.....P. ..P.F..V
BFD0:  08 05 02 00 52 50 9A 92  07 F2 0B 83 C4 0C B8 00   ....RP.. ........
BFE0:  00 E9 00 00 5E 5F 8B E5  5D CB 55 8B EC 81 EC 4A   ....^_.. ].U....J
BFF0:  07 57 56 FF 76 08 FF 76  06 B8 72 06 1E 50 B8 7A   .WV.v..v ..r..P.z
C000:  06 1E 50 8D 86 BC F8 16  50 9A 4C 27 F2 0B 83 C4   ..P..... P.L'....
C010:  10 B8 83 06 1E 50 8D 86  BC F8 16 50 9A 36 07 F2   .....P.. ...P.6..
```

```
C020:  0B 83 C4 08 89 86 B8 F8  89 96 BA F8 0B D0 74 03   ........ ......t.
C030:  E9 06 00 B8 FF FF E9 4C  00 8D 86 EE F8 16 50 FF   .......L ......P.
C040:  76 0C FF 76 0A 9A 57 06  77 09 83 C4 08 89 86 B6   v..v..W. w.......
C050:  F8 FF B6 BA F8 FF B6 B8  F8 FF B6 B6 F8 B8 01 00   ........ ........
C060:  50 8D 86 EE F8 16 50 9A  04 09 F2 0B 83 C4 0C FF   P.....P. ........
C070:  B6 BA F8 FF B6 B8 F8 9A  3C 06 F2 0B 83 C4 04 B8   ........ <.......
C080:  00 00 E9 00 00 5E 5F 8B  E5 5D CB 55 8B EC 81 EC   .....^_. .].U....
C090:  48 07 57 56 FF 76 08 FF  76 06 B8 72 06 1E 50 B8   H.WV.v.. v..r..P.
C0A0:  86 06 1E 50 8D 86 BC F8  16 50 9A 4C 27 F2 0B 83   ...P.... .P.L'...
C0B0:  C4 10 B8 8F 06 1E 50 8D  86 BC F8 16 50 9A 36 07   ......P. ....P.6.
C0C0:  F2 0B 83 C4 08 89 86 B8  F8 89 96 BA F8 0B D0 74   ........ .......t
C0D0:  03 E9 06 00 B8 FF FF E9  48 00 FF B6 BA F8 FF B6   ........ H.......
C0E0:  B8 F8 B8 B8 0B 50 B8 01  00 50 8D 86 EE F8 16 50   .....P.. .P.....P
C0F0:  9A 92 07 F2 0B 83 C4 0C  8D 86 EE F8 16 50 FF 76   ........ .....P.v
C100:  0C FF 76 0A 9A 84 07 77  09 83 C4 08 FF B6 BA F8   ..v....w ........
C110:  FF B6 B8 F8 9A 3C 06 F2  0B 83 C4 04 B8 00 00 E9   .....<.. ........
C120:  00 00 5E 5F 8B E5 5D CB  00 10 00 B1 B4 30 CD 21   ..^_..]. .....0.!
C130:  3C 02 73 05 33 C0 06 50  CB BF 32 1F 8B 36 02 00   <.s.3..P ..2..6..
C140:  2B F7 81 FE 00 10 72 03  BE 00 10 FA 8E D7 81 C4   +.....r. ........
C150:  AE 0E FB 73 12 16 1F 0E  E8 59 02 33 C0 50 0E E8   ...s.... .Y.3.P..
C160:  3B 05 B8 FF 4C CD 21 8B  C6 B1 04 D3 E0 48 36 A3   ;...L.!. .....H6.
C170:  96 06 BB 98 06 36 8C 17  83 E4 FE 36 89 67 04 B8   .....6.. ...6.g..
C180:  FE FF 50 36 89 67 0A F7  D0 50 36 89 67 06 36 89   ..P6.g.. .P6.g.6.
C190:  67 08 36 89 26 92 06 03  F7 89 36 02 00 8C C3 2B   g.6.&... ..6....+
C1A0:  DE F7 DB B4 4A CD 21 36  8C 1E D2 06 16 07 FC BF   ....J.!6 ........
C1B0:  4E 0C B9 B0 0E 2B CF 33  C0 F3 AA 16 1F 8B 0E BA   N....+.3 ........
C1C0:  0A E3 02 FF D1 9A BE 04  F2 0B 9A 10 03 F2 0B 33   ........ .......3
C1D0:  ED 9A 18 01 F2 0B 16 1F  FF 36 F7 06 FF 36 F5 06   ........ .6...6..
C1E0:  FF 36 F3 06 FF 36 F1 06  FF 36 EF 06 9A 00 00 00   .6...6.. .6......
C1F0:  00 50 0E E8 FB 00 C3 2E  A1 15 01 8E D8 B8 03 00   .P...... ........
C200:  36 C7 06 94 06 DD 01 50  0E E8 A8 01 0E E8 8D 04   6......P ........
C210:  36 81 3E BC 0A D6 D6 75  07 58 50 36 FF 16 C0 0A   6.>....u .XP6....
C220:  B8 FF 00 50 0E FF 16 94  06 32 1F 00 B8 00 35 CD   ...P.... .2....5.
C230:  21 89 1E BE 06 8C 06 C0  06 0E 1F B8 00 25 BA E3   !....... .....%..
C240:  00 CD 21 16 1F 8B 0E CE  0A E3 2E 8E 06 D2 06 26   ..!..... .......&
C250:  8B 36 2C 00 C5 06 D0 0A  8C DA 33 DB 36 FF 1E CC   .6,..... ..3.6...
C260:  0A 73 05 16 1F E9 6E 01  36 C5 06 D4 0A 8C DA BB   .s....n. 6.......
C270:  03 00 36 FF 1E CC 0A 16  1F 8E 06 D2 06 26 8B 0E   ..6..... .....&..
C280:  2C 00 E3 3E 8E C1 33 FF  26 80 3D 00 74 34 B9 0D   ,..>..3. &.=.t4..
C290:  00 BE B0 06 F3 A6 74 0B  B9 FF 7F 33 C0 F2 AE 75   ......t. ...3...u
C2A0:  21 EB E5 06 1E 07 1F 8B  F7 BF DB 06 B1 04 AC 2C   !....... .......,
C2B0:  41 72 0D D2 E0 92 AC 2C  41 72 05 0A C2 AA EB EE   Ar....., Ar......
C2C0:  16 1F BB 04 00 80 A7 DB  06 BF B8 00 44 CD 21 72   ........ ....D.!r
C2D0:  0A F6 C2 80 74 05 80 8F  DB 06 40 4B 79 E7 BE D8   ....t... ..@Ky...
C2E0:  0A BF D8 0A E8 BA 00 BE  D8 0A BF D8 0A E8 B1 00   ........ ........
C2F0:  CB 55 8B EC 33 C9 EB 1A  55 8B EC B9 01 00 EB 12   .U..3... U.......
C300:  55 8B EC 56 57 B9 00 01  EB 08 55 8B EC 56 57 B9   U..VW... ..U..VW.
C310:  01 01 51 0A C9 75 1E BE  AE 0C BF AE 0C E8 81 00   ..Q..u.. ........
C320:  BE D8 0A BF DC 0A E8 78  00 81 3E BC 0A D6 D6 75   .......x ..>....u
C330:  04 FF 16 C2 0A BE DC 0A  BF DC 0A E8 63 00 BE DC   ........ ....c...
C340:  0A BF DC 0A E8 5A 00 9A  EC 02 F2 0B 0B C0 74 11   .....Z._ ......t.
C350:  58 0A E4 50 75 0B 83 7E  06 00 75 05 C7 46 06 FF   X..Pu..~ ..u..F..
C360:  00 E8 10 00 58 0A E4 75  07 8B 46 06 B4 4C CD 21   ....X..u ..F..L.!
C370:  5F 5E 5D CB 8B 0E CE 0A  E3 07 BB 02 00 FF 1E CC   _^]..... ........
```

```
C380:  0A 1E C5 16 BE 06 B8 00  25 CD 21 1F 80 3E 00 07    ........ %.!..>..
C390:  00 74 0D 1E A0 01 07 C5  16 02 07 B4 25 CD 21 1F    .t...... ....%.!.
C3A0:  C3 3B F7 73 0E 83 EF 04  8B 05 0B 45 02 74 F2 FF    .;.s.... ...E.t..
C3B0:  1D EB EE C3 55 8B EC B8  FC 00 50 0E E8 DE 02 83    ....U... ..P.....
C3C0:  3E 08 07 00 74 04 FF 1E  06 07 B8 FF 00 50 0E E8    >...t... .....P..
C3D0:  CB 02 8B E5 5D CB B8 02  00 E9 2B FE 59 5A 8B DC    ....]... ..+.YZ..
C3E0:  2B D8 72 0B 3B 1E 0E 07  72 05 8B E3 52 51 CB 52    +.r.;... r...RQ.R
C3F0:  51 A1 0A 07 40 75 05 33  C0 E9 0B FE FF 2E 0A 07    Q...@u.3 ........
C400:  56 33 F6 B9 42 00 32 E4  FC AC 32 E0 E2 FB 80 F4    V3..B.2. ..2.....
C410:  55 74 0F 0E E8 9D FF B8  01 00 50 0E E8 7E 02 B8    Ut...... ..P..~..
C420:  01 00 5E CB 8F 06 10 07  8F 06 12 07 B4 30 CD 21    ..^..... .....0.!
C430:  A3 D4 06 BA 01 00 3C 02  74 29 8E 06 D2 06 26 8E    ......<. t)....&.
C440:  06 2C 00 8C 06 FB 06 33  C0 99 B9 00 80 33 FF F2    .,.....3 .....3..
C450:  AE AE 75 FB 47 47 89 3E  F9 06 B9 FF FF F2 AE F7    ..u.GG.> ........
C460:  D1 8B D1 BF 01 00 BE 81  00 8E 1E D2 06 AC 3C 20    ........ ......<
C470:  74 FB 3C 09 74 F7 3C 0D  74 6F 0A C0 74 6B 47 4E    t.<.t.<. to..tkGN
C480:  AC 3C 20 74 E8 3C 09 74  E4 3C 0D 74 5C 0A C0 74    .< t.<.t .<.t\..t
C490:  58 3C 22 74 24 3C 5C 74  03 42 EB E4 33 C9 41 AC    X<"t$<\t .B..3.A.
C4A0:  3C 5C 74 FA 3C 22 74 04  03 D1 EB D3 8B C1 D1 E9    <\t.<"t. ........
C4B0:  13 D1 A8 01 75 CA EB 01  4E AC 3C 0D 74 2B 0A C0    ....u... N.<.t+..
C4C0:  74 27 3C 22 74 BA 3C 5C  74 03 42 EB EC 33 C9 41    t'<"t.<\ t.B..3.A
C4D0:  AC 3C 5C 74 FA 3C 22 74  04 03 D1 EB DB 8B C1 D1    .<\t.<"t ........
C4E0:  E9 13 D1 A8 01 75 D2 EB  97 16 1F 89 3E EF 06 03    .....u.. ....>...
C4F0:  D7 47 D1 E7 D1 E7 03 D7  42 80 E2 FE 2B E2 8B C4    .G...... B...+...
C500:  A3 F1 06 8C 16 F3 06 8B  D8 03 FB 16 07 36 89 3F    ........ .....6.?
C510:  36 8C 57 02 83 C3 04 C5  36 F9 06 AC AA 0A C0 75    6.W..... 6......u
C520:  FA 36 8E 1E D2 06 BE 81  00 EB 03 33 C0 AA AC 3C    .6...... ...3...<
C530:  20 74 FB 3C 09 74 F7 3C  0D 75 03 E9 84 00 0A C0     t.<.t.< .u......
C540:  75 03 EB 7E 90 36 89 3F  36 8C 57 02 83 C3 04 4E    u..~.6.? 6.W....N
C550:  AC 3C 20 74 D6 3C 09 74  D2 3C 0D 74 62 0A C0 74    .< t.<.t .<.tb..t
C560:  5E 3C 22 74 27 3C 5C 74  03 AA EB E4 33 C9 41 AC    ^<"t'<\t ....3.A.
C570:  3C 5C 74 FA 3C 22 74 06  B0 5C F3 AA EB D1 B0 5C    <\t.<"t. .\.....\
C580:  D1 E9 F3 AA 73 06 B0 22  AA EB C5 4E AC 3C 0D 74    ....s.." ...N.<.t
C590:  2E 0A C0 74 2A 3C 22 74  B7 3C 5C 74 03 AA EB EC    ...t*<"t .<\t....
C5A0:  33 C9 41 AC 3C 5C 74 FA  3C 22 74 06 B0 5C F3 AA    3.A.<\t. <"t..\..
C5B0:  EB D9 B0 5C D1 E9 F3 AA  73 96 B0 22 AA EB CD 33    ...\.... s.."...3
C5C0:  C0 AA 16 1F C7 07 00 00  C7 47 02 00 00 FF 2E 10    ........ .G......
C5D0:  07 00 55 8B EC 83 EC 04  1E 8E 06 D2 06 26 8B 1E    ..U..... .....&..
C5E0:  2C 00 8E C3 8C 46 FE 33  C0 33 F6 33 FF B9 FF FF    ,....F.3 .3.3....
C5F0:  0B DB 74 0E 26 80 3E 00  00 00 74 06 F2 AE 46 AE    ..t.&.>. ..t...F.
C600:  75 FA 8B C7 40 24 FE 46  8B FE D1 E6 D1 E6 B9 09    u...@$.F ........
C610:  00 E8 C0 00 52 50 8B C6  E8 B9 00 A3 F5 06 89 16    ....RP.. ........
C620:  F7 06 89 56 FC 06 1F 8B  CF 8B D8 33 F6 5F 07 49    ...V.... ...3._.I
C630:  E3 33 8B 04 36 3B 06 B0  06 75 14 51 56 57 06 16    .3..6;.. .u.QVW..
C640:  07 BF B0 06 B9 06 00 F3  A7 07 5F 5E 59 74 0B 8E    ........ .._^Yt..
C650:  5E FC 89 3F 8C 47 02 83  C3 04 8E 5E FE AC AA 0A    ^..?.G.. ...^....
C660:  C0 75 FA E2 CD 8E 5E FC  89 0F 89 4F 02 1F 8B E5    .u....^. ...O....
C670:  5D CB 55 8B EC 56 57 1E  07 8B 56 06 BE 74 0B AD    ].U..VW. ..V..t..
C680:  3B C2 74 10 40 96 74 0C  97 33 C0 B9 FF FF F2 AE    ;.t.@.t. .3......
C690:  8B F7 EB EB 96 5F 5E 8B  E5 5D CA 02 00 55 8B EC    ....._^. .]...U..
C6A0:  57 FF 76 06 0E E8 CA FF  0B C0 74 20 92 8B FA 33    W.v..... ..t ...3
C6B0:  C0 B9 FF FF F2 AE F7 D1  49 BB 02 00 81 3E BC 0A    ........ I....>..
C6C0:  D6 D6 75 04 FF 16 BE 0A  B4 40 CD 21 5F 8B E5 5D    ..u..... .@.!_..]
C6D0:  CA 02 00 00 53 06 51 B9  00 04 87 0E 98 09 51 50    ....S.Q. ......QP
```

```
C6E0:  9A D0 22 F2 0B 5B 8F 06  98 09 59 8B DA 0B D8 74   .."..[.. ..Y....t
C6F0:  03 07 5B C3 8B C1 E9 0E  FB 00 72 15 33 C0 8B E5   ..[..... ..r.3...
C700:  5D CB 73 F8 50 E8 1A 00  58 32 E4 8B E5 5D CB 73   ].s.P... X2...].s
C710:  07 E8 0E 00 B8 FF FF 99  8B E5 5D CB 32 E4 E8 01   ........ ..].2...
C720:  00 CB A2 D7 06 0A E4 75  22 80 3E D4 06 03 72 0C   .......u ".>...r.
C730:  3C 22 73 0C 3C 20 72 04  B0 05 EB 06 3C 13 76 02   <"s.< r. ....<.v.
C740:  B0 13 BB 14 07 D7 98 A3  CC 06 C3 8A C4 EB F7 00   ........ ........
C750:  55 8B EC 83 EC 10 57 56  BF FF FF 8B 76 06 F6 44   U.....WV ....v..D
C760:  0A 40 74 03 E9 A3 00 F6  44 0A 83 75 03 E9 9A 00   .@t..... D..u....
C770:  1E 56 9A D2 0E F2 0B 83  C4 04 8B F8 8B DE 81 EB   .V...... ........
C780:  2E 07 8B 87 22 08 89 46  FA 1E 56 E8 12 06 83 C4   ...."..F ..V.....
C790:  04 8A 44 0B 2A E4 50 9A  F8 1D F2 0B 83 C4 02 0B   ..D.*.P. ........
C7A0:  C0 7C 64 83 7E FA 00 74  61 B8 28 07 1E 50 8D 46   .|d.~..t a.(..P.F
C7B0:  F0 16 50 9A DC 25 F2 0B  83 C4 08 8D 46 F2 89 46   ..P..%.. ....F..F
C7C0:  FC 8C 56 FE 80 7E F0 5C  74 14 B8 2A 07 1E 50 8D   ..V..~.\ t..*..P.
C7D0:  46 F0 16 50 9A 96 25 F2  0B 83 C4 08 EB 03 FF 4E   F..P..%. .......N
C7E0:  FC B8 0A 00 50 FF 76 FE  FF 76 FC FF 76 FA 9A 54   ....P.v. .v..v..T
C7F0:  26 F2 0B 83 C4 08 8D 46  F0 16 50 9A 42 2A F2 0B   &......F ..P.B*..
C800:  83 C4 04 0B C0 74 03 BF  FF FF C6 44 0A 00 8B C7   .....t.. ...D....
C810:  5E 5F 8B E5 5D CB 55 8B  EC 83 EC 08 9A E4 1C F2   ^_..].U. ........
C820:  0B 89 56 FE 0B D0 75 06  2B C0 99 EB 19 90 FF 76   ..V...u. +......v
C830:  FE 50 FF 76 0E FF 76 0C  FF 76 0A FF 76 08 FF 76   .P.v..v. .v..v..v
C840:  06 9A 10 0D F2 0B 8B E5  5D CB 55 8B EC 2B C0 50   ........ ].U..+.P
C850:  FF 76 0C FF 76 0A FF 76  08 FF 76 06 9A 02 07 F2   .v..v..v ..v.....
C860:  0B 8B E5 5D CB 90 55 8B  EC 83 EC 06 57 56 8B 76   ...]..U. ....WV.v
C870:  06 1E 56 E8 A6 06 83 C4  04 8B F8 8D 46 0E 16 50   ..V..... ....F..P
C880:  FF 76 0C FF 76 0A 1E 56  9A FA 17 F2 0B 83 C4 0C   .v..v..V ........
C890:  89 46 FA 1E 56 57 E8 04  07 83 C4 06 8B 46 FA 5E   .F..VW.. .....F.^
C8A0:  5F 8B E5 5D CB 90 55 8B  EC 83 EC 04 56 57 8B 46   _..]..U. ....VW.F
C8B0:  0A F7 66 0C 8B C8 0B CA  74 61 89 46 FC 89 56 FE   ..f..... ta.F..V.
C8C0:  C4 5E 06 8B 76 0E 0B D2  75 1F 3D FF FF 74 1A 8B   .^..v... u.=..t..
C8D0:  CB 03 C8 72 14 50 53 52  8B C8 E8 6A 00 8B C8 5A   ...r.PSR ...j...Z
C8E0:  5B 58 2B C1 83 DA 00 EB  3C 83 FB 01 77 05 B9 00   [X+..... <...w...
C8F0:  80 EB 04 8B CB F7 D9 51  50 53 52 E8 49 00 8B C8   .......Q PSR.I...
C900:  5A 5B 58 5F 2B C1 83 DA  00 3B CF 72 18 03 D9 73   Z[X_+... .;.r...s
C910:  0C 8C C1 81 C1 00 10 8E  C1 EB 02 EB 24 8B C8 0B   ........ ....$...
C920:  CA 75 A3 EB 00 8B C8 0B  CA 74 13 8B 4E FC 2B C8   .u...... .t..N.+.
C930:  8B C1 8B 4E FE 1B CA 8B  D1 F7 76 0A EB 03 8B 46   ...N.... ..v....F
C940:  0C 5F 5E 8B E5 5D CB 55  8B EC 83 EC 04 89 4E FE   ._^..].U ......N.
C950:  BF 1E 08 8B C6 2D 2E 07  03 F8 F6 44 0A 0C 75 05   .....-.. ...D..u.
C960:  F6 05 01 74 05 8B 45 02  EB 03 B8 00 02 89 46 FC   ...t..E. ......F.
C970:  F6 44 0A 0C 75 05 F6 05  01 74 33 8B 44 04 0B C0   .D..u... .t3.D...
C980:  74 2C 3B C1 76 02 8B C1  50 53 51 06 50 FF 74 02   t,;.v... PSQ.P.t.
C990:  FF 34 06 53 0E E8 90 20  83 C4 0A 07 59 5B 58 2B   .4.S...  ....Y[X+
C9A0:  C8 29 44 04 03 D8 01 04  EB 00 E3 62 EB C2 3B 4E   .)D..... ...b..;N
C9B0:  FC 72 30 33 D2 8B C1 F7  76 FC 8B C1 2B C2 53 51   .r03.... v...+.SQ
C9C0:  06 50 06 53 33 C0 8A 44  0B 50 0E E8 A4 17 83 C4   .P.S3..D .P......
C9D0:  08 07 59 5B 0B C0 74 2C  3D FF FF 74 2D 2B C8 03   ..Y[..t, =..t-+..
C9E0:  D8 EB C7 53 51 06 1E 56  0E E8 2C 02 83 C4 04 07   ...SQ..V ..,.....
C9F0:  59 5B 3D FF FF 74 17 26  88 07 43 49 8B 45 02 89   Y[=..t.& ..CI.E..
CA00:  46 FC EB A6 80 4C 0A 10  EB 04 80 4C 0A 20 8B 46   F....L.. ...L. .F
CA10:  FE 2B C1 8B E5 5D C3 00  55 8B EC 83 EC 04 56 57   .+...].. U.....VW
CA20:  8B 46 0A F7 66 0C 8B C8  0B CA 74 61 89 46 FC 89   .F..f... ..ta.F..
CA30:  56 FE C4 5E 06 8B 76 0E  0B D2 75 1F 3D FF FF 74   V..^..v. ..u.=..t
```

```
CA40:  1A 8B CB 03 C8 72 14 50  53 52 8B C8 E8 6A 00 8B   .....r.P SR...j..
CA50:  C8 5A 5B 58 2B C1 83 DA  00 EB 3C 83 FB 01 77 05   .Z[X+... ..<...w.
CA60:  B9 00 80 EB 04 8B CB F7  D9 51 50 53 52 E8 49 00   ........ .QPSR.I.
CA70:  8B C8 5A 5B 58 5F 2B C1  83 DA 00 3B CF 72 18 03   ..Z[X_+. ...;.r..
CA80:  D9 73 0C 8C C1 81 C1 00  10 8E C1 EB 02 EB 24 8B   .s...... ......$.
CA90:  C8 0B CA 75 A3 EB 00 8B  C8 0B CA 74 13 8B 4E FC   ...u.... ...t..N.
CAA0:  2B C8 8B C1 8B 4E FE 1B  CA 8B D1 F7 76 0A EB 03   +....N.. ....v...
CAB0:  8B 46 0C 5F 5E 8B E5 5D  CB 55 8B EC 83 EC 04 89   .F._^..] .U......
CAC0:  4E FE BF 1E 08 8B C6 2D  2E 07 03 F8 F6 44 0A 0C   N......- .....D..
CAD0:  75 05 F6 05 01 74 05 8B  45 02 EB 03 B8 00 02 89   u....t.. E.......
CAE0:  46 FC F6 44 0A 08 75 05  F6 05 01 74 36 8B 44 04   F..D..u. ...t6.D.
CAF0:  0B C0 74 2F 3B C1 76 02  8B C1 50 53 51 06 50 06   ..t/;.v. ..PSQ.P.
CB00:  53 FF 74 02 FF 34 0E E8  1E 1F 83 C4 0A 07 59 5B   S.t..4.. ......Y[
CB10:  58 2B C8 29 44 04 03 D8  01 04 EB 00 0B C9 75 C2   X+.)D... ......u.
CB20:  E9 83 00 3B 4E FC 72 50  F6 44 0A 08 75 05 F6 05   ...;N.rP .D..u...
CB30:  01 74 13 53 51 06 1E 56  0E E8 AA 04 83 C4 04 07   .t.SQ..V ........
CB40:  59 5B 0B C0 75 60 33 D2  8B C1 F7 76 FC 8B C1 2B   Y[..u`3. ...v...+
CB50:  C2 50 53 51 06 50 06 53  33 C0 8A 44 0B 50 0E E8   .PSQ.P.S 3..D.P..
CB60:  0E 17 83 C4 08 07 59 5B  5A 3D FF FF 74 34 2B C8   ......Y[ Z=..t4+.
CB70:  3B C2 75 2E 03 D8 EB A4  33 C0 26 8A 07 53 51 06   ;.u..... 3.&..SQ.
CB80:  1E 56 50 0E E8 2D 01 83  C4 06 07 59 5B 3D FF FF   .VP..-.. ...Y[=..
CB90:  74 14 43 49 8B 45 02 0B  C0 75 01 40 89 46 FC E9   t.CI.E.. .u.@.F..
CBA0:  7A FF 80 4C 0A 20 8B 46  FE 2B C1 8B E5 5D C3 00   z..L. .F .+...]..
CBB0:  55 8B EC 83 EC 06 57 B8  3A 07 1E 50 E8 5D 03 83   U.....W. :..P.]..
CBC0:  C4 04 8B F8 8D 46 0A 16  50 FF 76 08 FF 76 06 B8   .....F.. P.v..v..
CBD0:  3A 07 1E 50 9A FA 17 F2  0B 83 C4 0C 89 46 FA B8   :..P.... .....F..
CBE0:  3A 07 1E 50 57 E8 B5 03  83 C4 06 8B 46 FA 5F 8B   :..PW... ....F._.
CBF0:  E5 5D CB 90 55 8B EC 83  EC 04 56 8D 46 0A 16 50   .]..U... ..V.F..P
CC00:  FF 76 08 FF 76 06 BE 2E  07 1E 56 9A A6 0F F2 0B   .v..v... ..V.....
CC10:  83 C4 0C 5E 8B E5 5D CB  55 8B EC 56 57 8B 76 06   ...^..]. U..VW.v.
CC20:  8A 44 0A A8 83 74 5F A8  40 75 5B A8 02 75 48 0C   .D...t_. @u[..uH.
CC30:  01 88 44 0A 8B FE 81 EF  2E 07 81 C7 1E 08 A8 0C   ..D..... ........
CC40:  75 0D F6 05 01 75 08 1E  56 E8 8C 01 83 C4 04 8B   u....u.. V.......
CC50:  44 06 89 04 FF 75 02 FF  74 08 50 33 DB 8A 5C 0B   D....u.. t.P3..\.
CC60:  53 0E E8 0D 15 83 C4 08  0B C0 74 11 3D FF FF 75   S....... ..t.=..u
CC70:  1A 80 4C 0A 20 EB 0A 80  4C 0A 20 EB 09 80 4C 0A   ..L. ... L. ...L.
CC80:  10 C7 44 04 00 00 B8 FF  FF EB 25 8A BF DB 06 80   ..D..... ..%.....
CC90:  E7 82 80 FF 82 75 0B 8A  7C 0A F6 C7 82 75 03 80   .....u.. |....u..
CCA0:  0D 20 48 89 44 04 C4 1C  33 C0 26 8A 07 43 89 1C   . H.D... 3.&..C..
CCB0:  5F 5E 5D CB 55 8B EC 56  57 8B 76 08 8A 44 0A A8   _^].U..V W.v..D..
CCC0:  82 74 6A A8 40 75 66 C7  44 04 00 00 A8 01 74 0B   .tj.@uf. D.....t.
CCD0:  A8 10 74 59 8B 4C 06 89  0C 24 FE 0C 02 24 EF 88   ..tY.L.. .$...$..
CCE0:  44 0A 8B FE 81 EF 2E 07  81 C7 1E 08 33 DB 8A 5C   D....... ....3..\
CCF0:  0B A8 08 75 51 A8 04 75  1E F6 05 01 75 48 81 FE   ...uQ..u ....uH..
CD00:  3A 07 74 0C 81 FE 46 07  74 06 81 FE 5E 07 75 26   :.t...F. t...^.u&
CD10:  F6 87 DB 06 40 74 1F B9  01 00 51 16 8D 7E 06 57   ....@t.. ..Q..~.W
CD20:  53 0E E8 4B 15 83 C4 08  B9 01 00 EB 46 B8 FF FF   S..K.... ....F...
CD30:  80 4C 0A 20 EB 65 53 1E  56 E8 9C 00 83 C4 04 5B   .L. .eS. V......[
CD40:  F6 44 0A 08 74 D1 8B 0C  8B 54 06 2B CA 42 89 14   .D..t... .T.+.B..
CD50:  8B 55 02 4A 89 54 04 E3  25 51 51 FF 74 08 FF 74   .U.J.T.. %QQ.t..t
CD60:  06 53 0E E8 0A 15 83 C4  08 59 C4 7C 06 8B 56 06   .S...... .Y.|..V.
CD70:  26 88 15 3B C1 75 B6 33  C0 8A 46 06 EB 1D 33 C0   &..;.u.3 ..F...3.
CD80:  F6 87 DB 06 20 74 E3 B9  02 00 51 50 50 53 0E E8   .... t.. ..QPPS..
CD90:  9A 11 83 C4 08 33 C0 8B  C8 EB CF 5F 5E 5D CB 00   .....3.. ..._^]..
```

```
CDA0:  55 8B EC 56 8B 76 04 8A  44 0A A8 83 74 26 A8 08   U..V.v.. D...t&..
CDB0:  74 22 FF 74 08 FF 74 06  9A D6 22 F2 0B 83 C4 04   t".t..t. ..".....
CDC0:  80 64 0A F7 33 C0 89 44  06 89 44 08 89 04 89 44   .d..3..D ..D....D
CDD0:  02 89 44 04 5E 5D C3 00  55 8B EC 56 8B 76 04 B8   ..D.^].. U..V.v..
CDE0:  00 02 50 9A D0 22 F2 0B  59 8B DE 81 EB 2E 07 81   ..P..".. Y.......
CDF0:  C3 1E 08 0B D2 74 0B 80  4C 0A 08 C7 47 02 00 02   .....t.. L...G...
CE00:  EB 0E 80 4C 0A 04 C7 47  02 01 00 8C DA 8D 47 01   ...L...G ......G.
CE10:  89 54 02 89 04 89 54 08  89 44 06 C7 44 04 00 00   .T....T. .D..D...
CE20:  5E 5D C3 00 55 8B EC 83  EC 08 57 56 C4 5E 0A 26   ^]..U... ..WV.^.&
CE30:  8A 07 98 3D 77 00 74 48  77 08 2C 61 74 4C 2C 11   ...=w.tH w.,atL,.
CE40:  74 06 2B C0 99 E9 CD 00  2B F6 C6 46 FC 01 C7 46   t.+..... +..F...F
CE50:  FE 01 00 FF 46 0A C4 5E  0A 26 80 3F 00 74 5B 83   ....F..^ .&.?.t[.
CE60:  7E FE 00 74 55 26 8A 07  98 3D 74 00 74 34 77 08   ~..tU&.. .=t.t4w.
CE70:  2C 2B 74 1C 2C 37 74 36  C7 46 FE 00 00 EB D4 90   ,+t.,7t6 .F......
CE80:  BE 01 03 C6 46 FC 02 EB  C5 90 BE 09 01 EB F4 90   ....F... ........
CE90:  F7 C6 02 00 75 E2 83 CE  02 83 E6 FE C6 46 FC 80   ....u... .....F..
CEA0:  EB B1 F7 C6 00 C0 75 D0  81 CE 00 40 EB A5 F7 C6   ......u. ...@....
CEB0:  00 C0 75 C4 81 CE 00 80  EB 99 B8 A4 01 50 FF 76   ..u..... .....P.v
CEC0:  0E 56 FF 76 08 FF 76 06  9A 92 1E F2 0B 83 C4 0A   .V.v..v. ........
CED0:  89 46 FA 0B C0 7D 03 E9  68 FF FF 06 2C 07 8B 7E   .F...}.. h...,..~
CEE0:  10 8B C7 2D 2E 07 05 1E  08 89 46 F8 8A 46 FC 88   ...-.... ..F..F..
CEF0:  45 0A 8B 5E F8 C6 07 00  2B C0 89 45 04 89 47 04   E..^.... +..E..G.
CF00:  89 45 02 89 05 89 45 08  89 45 06 8A 46 FA 88 45   .E....E. .E..F..E
CF10:  0B 8B C7 8C DA 5E 5F 8B  E5 5D CB 90 55 8B EC 56   .....^_. .]..U..V
CF20:  57 8B 76 04 BB 12 09 81  FE 3A 07 74 12 BB 16 09   W.v..... .:.t....
CF30:  81 FE 46 07 74 09 BB 1A  09 81 FE 5E 07 75 58 8B   ..F.t... ...^.uX.
CF40:  FE 81 EF 2E 07 81 C7 1E  08 F6 44 0A 0C 75 48 F6   ........ ..D..uH.
CF50:  05 01 75 43 8B 07 8B 57  02 8B C8 0B CA 74 21 89   ..uC...W .....t!.
CF60:  44 06 89 54 08 89 04 89  54 02 C7 44 04 00 02 C7   D..T.... T..D....
CF70:  45 02 00 02 80 4C 0A 02  C6 05 11 B8 01 00 EB 19   E....L.. ........
CF80:  53 B8 00 02 50 9A D0 22  F2 0B 5B 5B 0B D2 74 07   S...P.." ..[[..t.
CF90:  89 07 89 57 02 EB C8 33  C0 5F 5E 5D C3 55 8B EC   ...W...3 ._^].U..
CFA0:  56 57 8B 76 06 8B FE 81  EF 2E 07 81 C7 1E 08 F6   VW.v.... ........
CFB0:  05 10 74 2D 33 DB 8A 5C  0B F6 87 DB 06 40 74 21   ..t-3..\ .....@t!
CFC0:  1E 56 0E E8 20 00 83 C4  04 83 7E 04 00 74 12 33   .V.. ... ..~..t.3
CFD0:  C0 88 05 89 45 02 89 04  89 44 02 89 44 06 89 44   ....E... .D..D..D
CFE0:  08 5F 5E 5D C3 00 55 8B  EC 83 EC 02 57 56 2B FF   ._^]..U. ....WV+.
CFF0:  8B 46 08 0B 46 06 75 08  2B C0 50 E8 70 00 EB 5F   .F..F.u. +.P.p.._
D000:  8B 76 06 8A 44 0A 8B C8  24 03 3C 02 75 3F F6 C1   .v..D... $.<.u?..
D010:  08 75 0D 8B DE 81 EB 2E  07 F6 87 1E 08 01 74 2D   .u...... ......t-
D020:  8B 04 2B 44 06 89 46 FE  0B C0 7E 21 50 FF 74 08   ..+D..F. ..~!P.t.
D030:  FF 74 06 8A 4C 0B 2A ED  51 9A 5C 21 F2 0B 83 C4   .t..L.*. Q.\!....
D040:  08 39 46 FE 74 07 80 4C  0A 20 BF FF FF 8B 44 06   .9F.t..L . ....D.
D050:  8B 54 08 89 04 89 54 02  C7 44 04 00 00 8B C7 5E   .T....T. .D.....^
D060:  5F 8B E5 5D CB 90 B8 01  00 50 E8 01 00 CB 55 8B   _..].... .P....U.
D070:  EC 83 EC 02 57 56 BE 2E  07 2B FF 89 7E FE EB 08   ....WV.. .+..~...
D080:  C7 46 FE FF FF 83 C6 0C  39 36 0E 09 72 16 F6 44   .F...... 96..r..D
D090:  0A 83 74 F1 1E 56 9A D2  0E F2 0B 83 C4 04 40 74   ..t..V.. ......@t
D0A0:  DF 47 EB E1 83 7E 04 01  75 04 8B C7 EB 03 8B 46   .G...~.. u......F
D0B0:  FE 5E 5F 8B E5 5D C2 02  00 90 55 8B EC B8 B4 01   .^_..].. ..U.....
D0C0:  9A C8 02 F2 0B 57 56 C6  46 B8 00 2B C0 89 46 E8   .....WV. F..+..F.
D0D0:  89 46 C6 C4 5E 0A 26 80  3F 00 75 03 E9 6F 07 26   .F..^.&. ?.u..o.&
D0E0:  8A 1F 2A FF F6 87 B9 09  08 74 2D FF 4E E8 8D 46   ..*..... .t-.N..F
D0F0:  E8 16 50 FF 76 08 FF 76  06 E8 DE 07 50 FF 76 08   ..P.v..v ....P.v.
```

```
D100:  FF 76 06 E8 B6 07 FF 46  0A C4 5E 0A 26 8A 1F 2A   .v.....F ..^.&..*
D110:  FF F6 87 B9 09 08 75 EE  8B 5E 0A 26 80 3F 25 74   ......u. .^.&.?%t
D120:  03 E9 02 07 C6 46 C0 00  2A C0 88 46 FC 88 46 B6   .....F.. *..F..F.
D130:  88 46 F2 88 46 F6 88 46  EE 88 86 52 FE 2B C0 89   .F..F..F ...R.+..
D140:  46 EA 89 46 BA 89 46 FE  89 46 C4 89 46 C2 EB 68   F..F..F. .F..F..h
D150:  90 90 FF 46 0A C4 5E 0A  26 8A 07 2A E4 8B F8 F6   ...F..^. &..*....
D160:  85 B9 09 04 74 1A FF 46  BA 8B 46 FE 8B C8 D1 E0   ....t..F ..F.....
D170:  D1 E0 03 C1 D1 E0 03 C7  2D 30 00 89 46 FE EB 38   ........ -0..F..8
D180:  3D 6C 00 74 1C 77 2D 3C  4C 74 13 7F 1F 2C 2A 74   =l.t.w-< Lt...,*t
D190:  15 2C 1C 74 23 EB 1D 90  FE 46 FC EB 1B 90 FE 46   .,.t#... .F.....F
D1A0:  F6 FE 46 F6 EB 12 FE 46  EE EB 0D 90 2C 4E 74 08   ..F....F ....,Nt.
D1B0:  2C 1A 74 E4 FE 86 52 FE  80 BE 52 FE 00 74 93 80   ,.t...R. ..R..t..
D1C0:  7E EE 00 75 14 C4 5E 0E  83 46 0E 04 26 8B 07 26   ~..u..^. .F..&..&
D1D0:  8B 57 02 89 46 F8 89 56  FA C6 86 52 FE 00 C4 5E   .W..F..V ...R...^
D1E0:  0A 26 8A 07 0C 20 2A E4  8B F8 83 FF 6E 74 29 83   .&... *. ....nt).
D1F0:  FF 63 74 16 83 FF 7B 74  11 8D 46 E8 16 50 FF 76   .ct...{t ..F..P.v
D200:  08 FF 76 06 E8 D3 06 EB  0D 90 FF 46 E8 FF 76 08   ..v..... ...F..v.
D210:  FF 76 06 E8 74 06 8B F0  83 7E BA 00 74 09 83 7E   .v..t... .~..t..~
D220:  FE 00 75 03 E9 93 05 8B  C7 E9 B0 05 83 7E BA 00   ..u..... .....~..
D230:  75 06 FF 46 BA FF 46 FE  C7 46 BC 24 09 8C 5E BE   u..F..F. .F.$..^.
D240:  EB 23 C7 46 BC 1E 09 EB  F4 90 FF 46 0A C4 5E 0A   .#.F.... ...F..^.
D250:  89 5E BC 8C 46 BE 26 80  3F 5E 75 0C 8D 47 01 89   .^..F.&. ?^u..G..
D260:  46 BC 8C 46 BE FE 4E B6  B8 20 00 50 2B C0 50 8D   F..F..N. . .P+.P.
D270:  46 C8 16 50 9A 72 29 F2  0B 83 C4 08 83 FF 7B 74   F..P.r). ......{t
D280:  03 E9 B3 00 C4 5E BC 26  80 3F 5D 74 03 E9 A7 00   .....^.& .?]t....
D290:  C6 46 C0 5D FF 46 BC C6  46 D3 20 E9 99 00 26 8A   .F.].F.. F. ...&.
D2A0:  07 88 46 F4 FF 46 BC 3C  2D 75 0F 80 7E C0 00 74   ..F..F.< -u..~..t
D2B0:  09 8B 5E BC 26 80 3F 5D  75 24 8A 5E F4 88 5E C0   ..^.&.?] u$.^..^.
D2C0:  B0 01 8A CB 80 E1 07 8B  D1 8A CA D2 E0 B1 03 D2   ........ ........
D2D0:  EB 2A FF 8D 4E C8 03 D9  36 08 07 EB 5A 90 FF 46   .*..N... 6...Z..F
D2E0:  BC 26 8A 07 88 46 F4 3A  46 C0 76 06 88 46 F0 EB   .&...F.: F.v..F..
D2F0:  0D 90 8A 46 C0 88 46 F0  8A 46 F4 88 46 C0 8A 46   ...F..F. .F..F..F
D300:  C0 88 46 F4 EB 21 8A 5E  F4 B0 01 8A CB 80 E1 07   ..F..!.^ ........
D310:  8B D1 8A CA D2 E0 B1 03  D2 EB 2A FF 8D 4E C8 03   ........ ..*..N..
D320:  D9 36 08 07 FE 46 F4 8A  46 F0 98 8A 4E F4 2A ED   .6...F.. F...N.*.
D330:  3B C1 7D D2 88 6E C0 C4  5E BC 26 80 3F 5D 74 03   ;.}..n.. ^.&.?]t.
D340:  E9 5B FF 26 80 3F 00 75  03 E9 02 05 83 FF 7B 75   .[.&.?.u ......{u
D350:  0A 8B C3 8C C2 89 46 0A  89 56 0C 8B 46 F8 8B 56   ......F. .V..F..V
D360:  FA 89 86 54 FE 89 96 56  FE 83 7E BA 00 74 0A 8B   ...T...V ..~..t..
D370:  46 FE FF 4E FE 0B C0 74  4F 83 FE FF 74 4A 8B DE   F..N...t O...tJ..
D380:  B1 03 D3 FB 8D 46 C8 03  D8 36 8A 07 32 46 B6 98   .....F.. .6..2F..
D390:  BA 01 00 8B CE 8B D9 80  E1 07 D3 E2 85 C2 74 28   ........ ......t(
D3A0:  80 7E EE 00 75 0E 8B C6  C4 5E F8 FF 46 F8 26 88   .~..u... .^..F.&.
D3B0:  07 EB 05 90 FF 86 54 FE  FF 46 E8 FF 76 08 FF 76   ......T. .F..v..v
D3C0:  06 E8 C6 04 8B F0 EB A1  FF 4E E8 56 FF 76 08 FF   ........ .N.V.v..
D3D0:  76 06 E8 E7 04 8B 46 F8  8B 56 FA 39 86 54 FE 75   v.....F. .V.9.T.u
D3E0:  09 39 96 56 FE 75 03 E9  64 04 80 7E EE 00 74 03   .9.V.u.. d..~..t.
D3F0:  E9 2B 04 FF 46 C6 83 FF  63 75 03 E9 20 04 8E C2   .+..F... cu.. ...
D400:  8B D8 26 C6 07 00 E9 15  04 90 BF 64 00 83 FE 2D   ..&..... ...d...-
D410:  75 06 FE 46 F2 EB 06 90  83 FE 2B 75 1F FF 4E FE   u..F.... ..+u..N.
D420:  75 0C 83 7E BA 00 74 06  FE 86 52 FE EB 0E FF 46   u..~..t. ..R....F
D430:  E8 FF 76 08 FF 76 06 E8  50 04 8B F0 83 FE 30 74   ..v..v.. P.....0t
D440:  03 E9 57 01 FF 46 E8 FF  76 08 FF 76 06 E8 3A 04   ..W..F.. v..v..:.
D450:  8B F0 3C 78 74 04 3C 58  75 14 FF 46 E8 FF 76 08   ..<xt.<X u..F..v.
```

```
D460:  FF 76 06 E8 24 04 8B F0  BF 78 00 E9 2D 01 FF 46   .v..$... .x..-..F
D470:  EA 83 FF 78 74 06 BF 6F  00 E9 1F 01 FF 4E E8 56   ...xt..o .....N.V
D480:  FF 76 08 FF 76 06 E8 33  04 BE 30 00 E9 0C 01 90   .v..v..3 ..0.....
D490:  80 7E FC 00 75 06 FE 46  F6 BF 46 00 83 FE 2D 75   .~..u..F ..F...-u
D4A0:  05 FE 46 F2 EB 08 83 FE  2B 74 03 E9 ED 00 FF 4E   ..F..... +t.....N
D4B0:  FE 74 03 E9 95 00 83 7E  BA 00 75 03 E9 8C 00 FE   .t.....~ ..u.....
D4C0:  86 52 FE E9 D5 00 83 FF  78 74 0D 83 FF 70 74 08   .R...... xt...pt.
D4D0:  83 FF 46 74 03 E9 84 00  F6 84 B9 09 80 74 15 B0   ..Ft.... .....t..
D4E0:  04 50 8D 46 C2 16 50 9A  74 2A F2 0B 56 E8 7C 03   .P.F..P. t*..V.|.
D4F0:  8B F0 EB 35 83 FF 46 75  2C 83 7E EA 00 74 26 83   ...5..Fu ,.~..t&.
D500:  FE 3A 75 1C 8B 46 C2 89  46 EC 2B C0 89 46 C4 89   .:u..F.. F.+..F..
D510:  46 C2 C7 46 EA FF FF BF  70 00 BE 30 00 EB 0A 90   F..F.... p..0....
D520:  C7 46 EA 00 00 FE 86 52  FE 80 BE 52 FE 00 75 5E   .F.....R ...R..u^
D530:  FF 46 EA 8D 44 D0 99 01  46 C2 11 56 C4 83 7E BA   .F..D... F..V..~.
D540:  00 74 08 FF 4E FE 75 03  E9 74 FF FF 46 E8 FF 76   .t..N.u. .t..F..v
D550:  08 FF 76 06 E8 33 03 8B  F0 EB 40 90 F6 84 B9 09   ..v..3.. ..@.....
D560:  04 74 C2 83 FF 6F 75 14  83 FE 38 7D B8 B0 03 50   .t...ou. ..8}...P
D570:  8D 46 C2 16 50 9A 74 2A  F2 0B EB AD B8 0A 00 99   .F..P.t* ........
D580:  52 50 8D 46 C2 16 50 9A  52 2A F2 0B EB 9B FF 4E   RP.F..P. R*.....N
D590:  E8 56 FF 76 08 FF 76 06  E8 21 03 80 BE 52 FE 00   .V.v..v. .!...R..
D5A0:  75 03 E9 21 FF 83 FF 70  75 0F 80 7E F6 00 74 09   u..!...p u..~..t.
D5B0:  8B 46 EC 8B 4E C2 89 46  C4 80 7E F2 00 74 0A F7   .F..N..F ..~..t..
D5C0:  5E C2 83 56 C4 00 F7 5E  C4 83 FF 46 75 05 C7 46   ^..V...^ ...Fu..F
D5D0:  EA 00 00 83 7E EA 00 75  03 E9 72 02 80 7E EE 00   ....~..u ..r..~..
D5E0:  74 03 E9 39 02 FF 46 C6  80 7E F6 00 74 14 8B 46   t..9..F. .~..t..F
D5F0:  C2 8B 56 C4 C4 5E F8 26  89 07 26 89 57 02 E9 1D   ..V..^.& ..&.W...
D600:  02 90 8B 46 C2 C4 5E F8  26 89 07 E9 10 02 8B 46   ...F..^. &......F
D610:  E8 99 89 46 C2 89 56 C4  EB CE 8D 86 58 FE 89 46   ...F..V. ....X..F
D620:  BC 8C 56 BE 83 FE 2D 75  13 8B D8 36 C6 07 2D 8D   ..V...-u ...6..-.
D630:  86 59 FE 89 46 BC 8C 56  BE EB 06 90 83 FE 2B 75   .Y..F..V ......+u
D640:  11 FF 4E FE FF 46 E8 FF  76 08 FF 76 06 E8 3A 02   ..N..F.. v..v..:.
D650:  8B F0 83 7E BA 00 74 07  81 7E FE 5D 01 7E 2D C7   ...~..t. .~.].~-.
D660:  46 FE 5D 01 EB 26 8B 46  FE FF 4E FE 0B C0 74 23   F.]..&.F ..N...t#
D670:  FF 46 EA 8B C6 C4 5E BC  FF 46 BC 26 88 07 FF 46   .F....^. .F.&...F
D680:  E8 FF 76 08 FF 76 06 E8  00 02 8B F0 F6 84 B9 09   ..v..v.. ........
D690:  04 75 D3 83 FE 2E 75 43  8B 46 FE FF 4E FE 0B C0   .u....uC .F..N...
D6A0:  74 39 C4 5E BC FF 46 BC  26 C6 07 2E EB 18 8B 46   t9.^..F. &......F
D6B0:  FE FF 4E FE 0B C0 74 23  FF 46 EA 8B C6 C4 5E BC   ..N...t# .F....^.
D6C0:  FF 46 BC 26 88 07 FF 46  E8 FF 76 08 FF 76 06 E8   .F.&...F ..v..v..
D6D0:  B8 01 8B F0 F6 84 B9 09  04 75 D3 83 7E EA 00 75   ........ .u..~..u
D6E0:  03 E9 81 00 8B C6 3C 65  74 04 3C 45 75 77 8B 46   ......<e t.<Euw.F
D6F0:  FE FF 4E FE 0B C0 74 6D  C4 5E BC FF 46 BC 26 C6   ..N...tm .^..F.&.
D700:  07 65 FF 46 E8 FF 76 08  FF 76 06 E8 7C 01 8B F0   .e.F..v. .v..|...
D710:  83 FE 2D 75 0F C4 5E BC  FF 46 BC 26 C6 07 2D EB   ..-u..^. .F.&..-.
D720:  08 90 90 90 83 FE 2B 75  35 8B 46 FE FF 4E FE 0B   ......+u 5.F..N..
D730:  C0 75 1D FF 46 FE EB 26  8B 46 FE FF 4E FE 0B C0   .u..F..& .F..N...
D740:  74 23 FF 46 EA 8B C6 C4  5E BC FF 46 BC 26 88 07   t#.F.... ^..F.&..
D750:  FF 46 E8 FF 76 08 FF 76  06 E8 2E 01 8B F0 F6 84   .F..v..v ........
D760:  B9 09 04 75 D3 FF 4E E8  56 FF 76 08 FF 76 06 E8   ...u..N. V.v..v..
D770:  4A 01 83 7E EA 00 75 03  E9 D3 00 80 7E EE 00 74   J..~..u. ....~..t
D780:  03 E9 9A 00 FF 46 C6 C4  5E BC 26 C6 07 00 8D 86   .....F.. ^.&.....
D790:  58 FE 16 50 FF 76 FA FF  76 F8 8A 46 F6 98 50 8E   X..P.v.. v..F..P.
D7A0:  06 6A 0B 26 FF 1E A2 09  83 C4 0A EB 71 90 C4 5E   .j.&.... ....q..^
D7B0:  0A 26 8A 07 2A E4 3B C6  74 12 FF 4E E8 56 FF 76   .&..*.;. t..N.V.v
```

```
D7C0:  08 FF 76 06 E8 F5 00 E9  84 00 90 90 FE 4E B8 80   ..v..... .....N..
D7D0:  7E EE 00 75 49 83 6E 0E  04 EB 43 90 2D 63 00 3D   ~..uI.n. ..C.-c.=
D7E0:  18 00 77 CA D1 E0 93 2E  FF A7 D8 16 18 11 88 13   ..w..... ........
D7F0:  06 15 06 15 06 15 9A 16  F6 12 9A 16 9A 16 9A 16   ........ ........
D800:  9A 16 FA 14 88 13 7C 13  9A 16 9A 16 2E 11 9A 16   ......|. ........
D810:  88 13 9A 16 9A 16 F9 12  9A 16 9A 16 36 11 FE 46   ........ ....6..F
D820:  B8 FF 46 0A EB 20 FF 46  E8 FF 76 08 FF 76 06 E8   ..F.. .F ..v..v..
D830:  58 00 8B F0 C4 5E 0A FF  46 0A 26 8A 07 2A E4 3B   X....^.. F.&..*.;
D840:  F0 74 03 E9 74 FF 83 FE  FF 74 03 E9 85 F8 83 FE   .t..t... .t......
D850:  FF 75 0C 83 7E C6 00 75  06 80 7E B8 00 74 05 8B   .u..~..u ..~..t..
D860:  46 C6 EB 02 8B C6 5E 5F  8B E5 5D CB 55 8B EC 8B   F.....^_ ..].U...
D870:  5E 04 F6 87 B9 09 04 74  05 8B C3 EB 08 90 8B C3   ^......t ........
D880:  24 DF 2D 07 00 5D C2 02  00 90 55 8B EC 83 EC 04   $.-..].. ..U.....
D890:  C4 5E 04 26 FF 4F 04 78  15 26 8B 07 26 8B 57 02   .^.&.O.x .&..&.W.
D8A0:  26 FF 07 8B D8 8E C2 26  8A 07 2A E4 EB 07 06 53   &......& ..*....S
D8B0:  9A 04 0B F2 0B 8B E5 5D  C2 04 00 90 55 8B EC 83   .......] ....U...
D8C0:  7E 08 FF 74 0E FF 76 06  FF 76 04 FF 76 08 9A 8C   ~..t..v. .v..v...
D8D0:  1D F2 0B 8B E5 5D C2 06  00 90 55 8B EC 56 C4 5E   .....].. ..U..V.^
D8E0:  08 26 FF 07 FF 76 06 FF  76 04 E8 9D FF 8B F0 F6   .&...v.. v.......
D8F0:  84 B9 09 08 75 E8 5E 8B  E5 5D C2 08 00 90 52 18   ....u.^. .]....R.
D900:  5D 18 73 18 A7 18 D3 18  DB 18 04 19 36 19 55 8B   ].s..... ....6.U.
D910:  EC B8 71 01 0E E8 C4 EA  56 57 33 C0 89 46 F8 88   ..q..... VW3..F..
D920:  46 FB C4 76 0A 26 AC 89  76 0A 88 46 FE 0A C0 74   F..v.&.. v..F...t
D930:  06 83 7E F8 00 7D 06 8B  46 F8 E9 B5 04 BB 26 09   ..~..}.. F.....&.
D940:  2C 20 3C 58 77 05 D7 24  0F EB 02 B0 00 B1 03 D2   , <Xw..$ ........
D950:  E0 02 46 FB D7 FE C1 D2  E8 88 46 FB 98 8B D8 D1   ..F..... ..F.....
D960:  E3 2E FF A7 EA 17 8A 56  FE B9 01 00 E8 36 04 EB   .......V .....6..
D970:  B1 33 C0 89 46 F0 89 46  F6 89 46 EE C7 46 FC 20   .3..F..F ..F..F.
D980:  00 48 89 46 F4 EB 9B 8A  46 FE 3C 2D 75 06 80 4E   .H.F.... F.<-u..N
D990:  FC 04 EB 8E 3C 2B 75 06  80 4E FC 01 EB 84 3C 20   ....<+u. .N....<
D9A0:  75 07 80 4E FC 02 E9 79  FF 3C 23 75 07 80 4E FC   u..N...y .<#u..N.
D9B0:  80 E9 6E FF 80 4E FC 08  E9 67 FF 8A 4E FE 80 F9   ..n..N.. .g..N...
D9C0:  2A 75 0F E8 5C 03 0B C0  79 17 F7 D8 80 4E FC 04   *u..\... y....N..
D9D0:  EB 0F 80 E9 30 32 ED 8B  46 F6 BB 0A 00 F7 E3 03   ....02.. F.......
D9E0:  C1 89 46 F6 E9 3B FF C7  46 F4 00 00 E9 33 FF 8A   ..F..;.. F....3..
D9F0:  4E FE 80 F9 2A 75 0C E8  28 03 0B C0 79 14 B8 FF   N...*u.. (...y...
DA00:  FF EB 0F 80 E9 30 32 ED  8B 46 F4 BB 0A 00 F7 E3   .....02. .F......
DA10:  03 C1 89 46 F4 E9 0A FF  8A 46 FE 3C 6C 75 06 80   ...F.... .F.<lu..
DA20:  4E FC 10 EB 22 3C 46 75  06 80 4E FC 20 EB 18 3C   N..."<Fu ..N. ..<
DA30:  4E 75 06 80 4E FD 10 EB  0E 3C 4C 75 06 80 4E FD   Nu..N... .<Lu..N.
DA40:  04 EB 04 80 4E FD 08 E9  D8 FE 8A 46 FE 3C 64 75   ....N... ...F.<du
DA50:  03 E9 94 01 3C 69 75 03  E9 8D 01 3C 75 75 03 E9   ....<iu. ...<uu..
DA60:  8A 01 3C 58 75 03 E9 89  01 3C 78 75 03 E9 88 01   ..<Xu... .<xu....
DA70:  3C 6F 75 03 E9 A2 01 3C  63 74 1A 3C 73 74 27 3C   <ou....< ct.<st'<
DA80:  6E 74 51 3C 70 74 60 3C  45 74 07 3C 47 74 03 E9   ntQ<pt`< Et.<Gt..
DA90:  BB 00 E9 B5 00 E8 8A 02  8D BE 8F FE 16 07 AA 4F   ........ .......O
DAA0:  B9 01 00 E9 F1 01 E8 90  02 0B FF 75 12 8C C0 0B   ........ ...u....
DAB0:  C0 75 0C 1E 07 BF 7F 09  8B 0E 85 09 E9 D8 01 57   .u...... .......W
DAC0:  8B 4E F4 E3 07 32 C0 F2  AE 75 01 4F 59 2B F9 87   .N...2.. .u.OY+..
DAD0:  CF E9 C3 01 E8 62 02 8B  46 F8 AB F6 46 FC 10 74   .....b.. F...F..t
DAE0:  03 33 C0 AB E9 3B FE F6  46 FC 30 75 05 E8 32 02   .3...;.. F.0u..2.
DAF0:  EB 39 E8 36 02 F6 46 FD  18 75 30 C6 46 FF 07 B9   .9.6..F. .u0.F...
DB00:  10 00 16 07 52 33 D2 8D  BE 97 FE BE 04 00 E8 B0   ....R3.. ........
DB10:  02 B9 10 00 8D BE 92 FE  58 33 D2 BE 04 00 E8 A0   ........ X3......
```

```
DB20:  02 C6 86 93 FE 3A B9 09  00 EB 18 C6 46 FF 07 B9   .....:.. ....F...
DB30:  10 00 16 07 33 D2 8D BE  92 FE BE 04 00 E8 81 02   ....3... ........
DB40:  B9 04 00 8D BE 8F FE E9  4D 01 FF 46 EE 80 4E FC   ........ M..F..N.
DB50:  40 8A 46 FE 0C 20 98 8B  F0 83 7E F4 00 7F 13 74   @.F.. .. ..~....t
DB60:  07 C7 46 F4 06 00 EB 0A  3D 67 00 75 05 C7 46 F4   ..F..... =g.u..F.
DB70:  01 00 8D BE 8F FE FF 76  EE FF 76 F4 56 16 57 FF   .......v ..v.V.W.
DB80:  76 10 FF 76 0E F6 46 FD  04 74 0A FF 1E AE 09 83   v..v..F. .t......
DB90:  46 0E 0A EB 08 FF 1E 9A  09 83 46 0E 08 83 C4 0E   F....... ..F.....
DBA0:  F6 46 FC 80 74 0F 83 7E  F4 00 75 09 16 57 FF 1E   .F..t..~ ..u..W..
DBB0:  A6 09 83 C4 04 83 FE 67  75 10 F7 46 FC 80 00 75   .......g u..F...u
DBC0:  09 16 57 FF 1E 9E 09 83  C4 04 16 07 26 80 3D 2D   ..W..... ....&.=-
DBD0:  75 05 47 80 4E FD 01 B9  FF FF 57 B0 00 F2 AE 4F   u.G.N... ..W....O
DBE0:  59 2B F9 87 CF E9 AF 00  80 4E FC 40 C6 46 FA 0A   Y+...... .N.@.F..
DBF0:  EB 35 C6 46 FF 07 EB 04  C6 46 FF 27 F6 46 FC 80   .5.F.... .F.'.F..
DC00:  74 11 C7 46 F0 02 00 C6  46 F2 30 B2 51 02 56 FF   t..F.... F.0.Q.V.
DC10:  88 56 F3 C6 46 FA 10 EB  0E F6 46 FC 80 74 04 80   .V..F... ..F..t..
DC20:  4E FD 02 C6 46 FA 08 F6  46 FC 10 74 05 E8 FB 00   N...F... F..t....
DC30:  EB 0E E8 ED 00 F6 46 FC  40 74 03 99 EB 02 33 D2   ......F. @t....3.
DC40:  F6 46 FC 40 74 0F 0B D2  7D 0B 80 4E FD 01 F7 D8   .F.@t... }..N....
DC50:  83 D2 00 F7 DA 83 7E F4  00 7D 07 C7 46 F4 01 00   ......~. .}..F...
DC60:  EB 04 80 66 FC F7 8B D8  0B DA 75 05 C7 46 F0 00   ...f.... ..u..F..
DC70:  00 8D 7E EB 16 07 8A 4E  FA 32 ED 8B 76 F4 E8 40   ..~....N .2..v..@
DC80:  01 F6 46 FD 02 74 0E E3  06 26 80 3D 30 74 06 4F   ..F..t.. .&.=0t.O
DC90:  26 C6 05 30 41 EB 00 F6  46 FC 40 74 31 F6 46 FD   &..0A... F.@t1.F.
DCA0:  01 74 0B C6 46 F2 2D C7  46 F0 01 00 EB 20 F6 46   .t..F.-. F.... .F
DCB0:  FC 01 74 0B C6 46 F2 2B  C7 46 F0 01 00 EB 0F F6   ..t..F.+ .F......
DCC0:  46 FC 02 74 09 C6 46 F2  20 C7 46 F0 01 00 8B 46   F..t..F.  .F....F
DCD0:  F6 2B C1 2B 46 F0 7D 02  33 C0 06 57 51 F6 46 FC   .+.+F.}. 3..WQ.F.
DCE0:  0C 75 07 8B C8 B2 20 E8  BB 00 50 16 07 8D 7E F2   .u.... . ..P...~.
DCF0:  8B 4E F0 E8 91 00 58 F6  46 FC 08 74 0D F6 46 FC   .N....X. F..t..F.
DD00:  04 75 07 8B C8 B2 30 E8  9B 00 59 5F 07 50 E8 76   .u....0. ..Y_.P.v
DD10:  00 58 F6 46 FC 04 74 07  8B C8 B2 20 E8 86 00 E9   .X.F..t. ... ....
DD20:  00 FC C4 76 0E 26 AD 89  76 0E C3 C4 76 0E 26 AD   ...v.&.. v...v.&.
DD30:  8B D0 26 AD 92 89 76 0E  C3 F6 46 FC 20 74 08 E8   ..&...v. ..F. t..
DD40:  E9 FF 8E C2 8B F8 C3 E8  D8 FF 8B F8 0B C0 75 03   ........ ......u.
DD50:  8E C0 C3 1E 07 C3 98 06  57 C4 5E 06 26 FF 4F 04   ........ W.^.&.O.
DD60:  78 10 26 8B 3F 26 FF 07  26 8E 47 02 AA 33 C0 5F   x.&.?&.. &.G..3._
DD70:  07 C3 51 52 06 53 50 0E  E8 39 EF 83 C4 06 5A 59   ..QR.SP. .9....ZY
DD80:  3D FF FF 75 E8 EB E8 E3  1B 8B F7 01 4E F8 57 33   =..u.... ....N.W3
DD90:  FF 26 AC E8 C0 FF 0B F8  E2 F7 0B FF 5F 74 05 C7   .&...... ...._t..
DDA0:  46 F8 FF FF C3 E3 19 01  4E F8 57 33 FF 8A C2 E8   F....... N.W3....
DDB0:  A4 FF 0B F8 E2 F7 0B FF  5F 74 05 C7 46 F8 FF FF   ........ _t..F...
DDC0:  C3 FD 57 93 0B F6 7F 0A  0B DB 75 06 0B D2 75 02   ..W..... ..u...u.
DDD0:  EB 1A 92 33 D2 F7 F1 93  F7 F1 92 87 D3 04 30 3C   ...3.... ......0<
DDE0:  39 76 03 02 46 FF AA 8B  C2 4E EB D8 59 2B CF 47   9v..F... .N..Y+.G
DDF0:  FC C3 5F 5E 8B E5 5D CB  55 8B EC 83 EC 04 56 BE   .._^..]. U.....V.
DE00:  2E 07 2B C0 89 46 FE 89  46 FC EB 03 83 C6 0C 39   ..+..F.. F......9
DE10:  36 0E 09 72 26 F6 44 0A  83 75 F1 C7 44 04 00 00   6..r&.D. .u..D...
DE20:  C6 44 0A 00 2B C0 89 44  08 89 44 06 89 44 02 89   .D..+..D ..D..D..
DE30:  04 C6 44 0B FF 89 76 FC  8C 5E FE 8B 46 FC 8B 56   ..D...v. .^..F..V
DE40:  FE 5E 8B E5 5D CB 55 8B  EC BB 3A 07 EB 06 55 8B   .^..].U. ..:...U.
DE50:  EC 8B 5E 08 FF 4F 04 78  0F FF 07 C4 1F 8A 46 06   ..^..O.x ......F.
DE60:  26 88 47 FF 32 E4 EB 0C  1E 53 FF 76 06 0E E8 43   &.G.2... .S.v...C
DE70:  EE 83 C4 06 5D CB 55 8B  EC BB 2E 07 EB 06 55 8B   ....].U. ......U.
```

```
DE80:  EC 8B 5E 06 FF 4F 04 78  0C FF 07 C4 1F 26 8A 47   ..^..O.x .....&.G
DE90:  FF 32 E4 EB 08 1E 53 0E  E8 7D ED 5B 5B 5D CB 00   .2....S. .}.[[]..
DEA0:  55 8B EC 57 56 8B 76 06  8B 7E 08 83 FE FF 74 12   U..WV.v. .~....t.
DEB0:  F6 45 0A 01 75 12 F6 45  0A 80 74 06 F6 45 0A 02   .E..u..E ..t..E..
DEC0:  74 06 B8 FF FF EB 3E 90  8B 45 08 0B 45 06 75 08   t.....>. .E..E.u.
DED0:  1E 57 E8 03 EF 83 C4 04  8B 05 8B 55 02 39 45 06   .W...... ...U.9E.
DEE0:  75 0D 39 55 08 75 08 83  7D 04 00 75 D5 FF 05 FF   u.9U.u.. }..u....
DEF0:  45 04 8B C6 FF 0D C4 1D  26 88 07 80 65 0A EF 80   E....... &...e...
DF00:  4D 0A 01 2A E4 5E 5F 8B  E5 5D CB 90 55 8B EC 8B   M..*.^_. .]..U...
DF10:  5E 06 3B 1E D9 06 72 06  B8 00 09 F9 EB 0B B4 3E   ^.;...r. .......>
DF20:  CD 21 72 05 C6 87 DB 06  00 E9 CE E7 55 8B EC 83   .!r..... ....U...
DF30:  EC 04 8B 5E 06 3B 1E D9  06 72 05 B8 00 09 EB 2A   ...^.;.. .r.....*
DF40:  F7 46 0A 00 80 74 48 83  7E 0C 00 74 1A 33 C9 8B   .F...tH. ~..t.3..
DF50:  D1 B8 01 42 CD 21 72 4B  F7 46 0C 02 00 75 0E 03   ...B.!rK .F...u..
DF60:  46 08 13 56 0A 79 28 B8  00 16 F9 EB 36 89 56 FE   F..V.y(. ....6.V.
DF70:  89 46 FC 8B D1 B8 02 42  CD 21 03 46 08 13 56 0A   .F.....B .!.F..V.
DF80:  79 0D 8B 4E FE 8B 56 FC  B8 00 42 CD 21 EB D8 8B   y..N..V. ..B.!...
DF90:  56 08 8B 4E 0A 8A 46 0C  B4 42 CD 21 72 05 80 A7   V..N..F. .B.!r...
DFA0:  DB 06 FD E9 69 E7 55 8B  EC 83 EC 04 32 FF 80 3E   ....i.U. ....2..>
DFB0:  D4 06 03 72 03 8A 7E 0C  8B 46 0E 89 46 0C EB 08   ...r..~. .F..F...
DFC0:  55 8B EC 83 EC 04 32 FF  88 7E FE 8B 46 0A 8B C8   U.....2. .~..F...
DFD0:  C6 46 FC 00 A9 00 80 75  10 A9 00 40 75 07 F6 06   .F.....u ...@u...
DFE0:  89 09 80 75 04 C6 46 FC  80 1E C5 56 06 24 03 0A   ...u..F. ...V.$..
DFF0:  C7 B4 3D CD 21 1F 73 12  3D 02 00 75 09 F7 C1 00   ..=.!.s. =..u....
E000:  01 74 03 E9 A5 00 F9 E9  05 E7 93 8B C1 25 00 05   .t...... .....%..
E010:  3D 00 05 75 09 B4 3E CD  21 B8 00 11 EB E8 C6 46   =..u..>. !......F
E020:  FD 01 B8 00 44 CD 21 F6  C2 80 74 04 80 4E FC 40   ....D.!. ..t..N.@
E030:  F6 46 FC 40 74 03 E9 DF  00 8B 46 0A A9 00 02 74   .F.@t... ..F....t
E040:  1E A9 03 00 74 09 33 C9  B4 40 CD 21 E9 C9 00 B4   ....t.3. .@.!....
E050:  3E CD 21 1E C5 56 06 B8  00 43 CD 21 1F EB 69 F6   >.!..V.. .C.!..i.
E060:  46 FC 80 75 03 E9 B0 00  A9 02 00 75 03 E9 A8 00   F..u.... ...u....
E070:  B9 FF FF 8B D1 B8 02 42  CD 21 F7 D9 1E 16 1F 8D   .......B .!......
E080:  56 FF B4 3F CD 21 1F 0B  C0 74 15 80 7E FF 1A 75   V..?.!.. .t..~..u
E090:  0F F7 D9 8B D1 B8 02 42  CD 21 33 C9 B4 40 CD 21   .......B .!3..@.!
E0A0:  33 C9 8B D1 B8 00 42 CD  21 EB 6D C6 46 FD 00 8B   3.....B. !.m.F...
E0B0:  4E 0C E8 AC 00 89 4E 0C  F6 46 FE FF 75 07 F7 46   N.....N. .F..u..F
E0C0:  0A 02 00 75 03 80 E1 FE  1E C5 56 06 B4 3C CD 21   ...u.... ..V..<.!
E0D0:  1F 73 03 E9 39 E6 93 F6  46 FE FF 75 07 F7 46 0A   .s..9... F..u..F.
E0E0:  02 00 75 34 B4 3E CD 21  8A 46 0A 24 03 0A 46 FE   ..u4.>.! .F.$..F.
E0F0:  1E C5 56 06 B4 3D CD 21  1F 72 D8 93 F6 46 FD 01   ..V..=.! .r...F..
E100:  75 16 F7 46 0C 01 00 74  0F 80 C9 01 1E C5 56 06   u..F...t ......V.
E110:  B8 01 43 CD 21 1F 72 BB  F6 46 FC 40 75 3F 1E C5   ..C.!.r. .F.@u?..
E120:  56 06 B8 00 43 CD 21 1F  8B C1 32 C9 25 01 00 74   V...C.!. ..2.%..t
E130:  02 B1 10 F7 46 0A 08 00  74 03 80 C9 20 3B 1E D9   ....F... t... ;..
E140:  06 72 0A B4 3E CD 21 B8  00 18 E9 B9 FE 0A 4E FC   .r..>.!. ......N.
E150:  80 C9 01 88 8F DB 06 8B  C3 8B E5 5D CB 32 C9 EB   ........ ...].2..
E160:  DC A1 CE 06 F7 D0 23 C1  33 C9 A8 80 75 03 80 C9   ......#. 3...u...
E170:  01 C3 55 8B EC 83 EC 02  8B 5E 06 3B 1E D9 06 72   ..U..... .^.;...r
E180:  06 F9 B8 00 09 EB 73 33  C0 8B 4E 0C E3 6C F6 87   ......s3 ..N..l..
E190:  DB 06 02 75 65 81 3E BC  0A D6 D6 75 04 FF 16 BE   ...ue.>. ...u....
E1A0:  0A 8B 4E 0C 1E C5 56 08  B4 3F CD 21 1F 73 04 B4   ..N...V. .?.!.s..
E1B0:  09 EB 47 F6 87 DB 06 80  74 40 80 A7 DB 06 FB 56   ..G..... t@.....V
E1C0:  57 1E 07 8E 5E 0A FC 8B  F2 8B FA 8B C8 E3 27 B4   W...^... ......'.
E1D0:  0D 80 3C 0A 75 06 26 80  8F DB 06 04 AC 3A C4 74   ..<.u.&. .....:.t
```

```
E1E0:  1C 3C 1A 75 08 26 80 8F  DB 06 02 EB 05 88 05 47   .<.u.&.. .......G
E1F0:  E2 EA 8B C7 2B C2 06 1F  5F 5E E9 12 E5 83 F9 01   ....+... _^......
E200:  74 07 80 3C 0A 74 E9 EB  E4 06 1F F6 87 DB 06 40   t..<.t.. .......@
E210:  74 1C B8 00 44 CD 21 F7  C2 20 00 75 0D 1E 16 1F   t...D.!. . .u....
E220:  8D 56 FF B4 3F CD 21 1F  72 CE B0 0A EB 30 1E 16   .V..?.!. r....0..
E230:  1F C6 46 FF 00 8D 56 FF  B4 3F CD 21 1F 72 B9 0B   ..F...V. .?.!.r..
E240:  C0 74 19 83 7E 0C 01 74  1F B9 FF FF 8B D1 B8 01   .t..~..t ........
E250:  42 CD 21 B9 01 00 80 7E  FF 0A 74 07 B0 0D C5 56   B.!....~ ..t....V
E260:  08 EB 8A C5 56 08 EB 88  80 7E FF 0A 75 DB EB BA   ....V... .~..u...
E270:  55 8B EC 83 EC 08 8B 5E  06 3B 1E D9 06 72 07 B8   U......^ .;...r..
E280:  00 09 F9 E9 89 E4 81 3E  BC 0A D6 D6 75 04 FF 16   .......> ....u...
E290:  BE 0A F6 87 DB 06 20 74  0B B8 02 42 33 C9 8B D1   ...... t ...B3...
E2A0:  CD 21 72 DF F6 87 DB 06  80 74 7C 8C 5E FA 8E 46   .!r..... .t|.^..F
E2B0:  0A C5 56 08 33 C0 89 46  FE 89 46 FC FC 57 56 8B   ..V.3..F ..F..WV.
E2C0:  FA 8B F2 89 66 F8 8B 4E  0C E3 3F B0 0A F2 AE 75   ....f..N ..?....u
E2D0:  51 1E 8E 5E FA 9A BC 22  F2 0B 3D A8 00 76 4A 1F   Q..^..." ..=..vJ.
E2E0:  83 EC 02 8B DC BA 00 02  3D 28 02 73 03 BA 80 00   ........ =(.s....
E2F0:  2B E2 8B D4 8B FA 16 07  8B 4E 0C AC 3C 0A 74 0C   +....... .N..<.t.
E300:  3B FB 74 19 AA E2 F4 E8  26 00 EB 79 B0 0D 3B FB   ;.t..... &..y..;.
E310:  75 03 E8 1B 00 AA B0 0A  FF 46 FC EB E3 E8 10 00   u....... .F......
E320:  EB E2 5E 5F 8E 5E FA EB  6D B8 FC FF 0E E8 AC E0   ..^_.^.. m.......
E330:  50 53 51 1E 06 1F 8B CF  2B CA E3 12 51 8B 5E 06   PSQ..... +...Q.^.
E340:  B4 40 CD 21 59 72 0E 01  46 FE 3B C8 77 07 1F 59   .@.!Yr.. F.;.w..Y
E350:  5B 58 8B FA C3 9F 1F 83  C4 08 83 7E FE 00 75 25   [X...... ...~..u%
E360:  9E 73 04 B4 09 EB 24 8E  5E FA F6 87 DB 06 40 74   .s....$. ^.....@t
E370:  0E 8E 5E 0A 8B 5E 08 80  3F 1A 75 03 F8 EB 0C F9   ..^..^.. ?.u.....
E380:  B8 00 1C EB 06 8B 46 FE  2B 46 FC 8B 66 F8 5E 5F   ......F. +F..f.^_
E390:  8E 5E FA E9 79 E3 8B 4E  0C 0B C9 75 05 8B C1 E9   .^..y..N ...u....
E3A0:  6D E3 1E C5 56 08 B4 40  CD 21 1E 07 1F 73 04 B4   m...V..@ .!...s..
E3B0:  09 EB E0 0B C0 75 DC F6  87 DB 06 40 74 0B 8B DA   .....u.. ...@t...
E3C0:  26 80 3F 1A 75 03 F8 EB  CA F9 B8 00 1C EB C4 00   &.?.u... ........
E3D0:  59 5A A1 0E 07 3B C4 73  07 2B C4 F7 D8 52 51 CB   YZ...;.s .+...RQ.
E3E0:  33 C0 EB F9 EA EF 22 F2  0B 00 EA DC 22 F2 0B 00   3.....". ...."...
E3F0:  55 8B EC 56 C4 76 06 8C  C1 E3 05 26 80 4C FE 01   U..V.v.. ...&.L..
E400:  5E 5D CB 55 8B EC 56 57  8B 4E 06 83 F9 E8 77 69   ^].U..VW .N....wi
E410:  1E A1 8C 09 0B C0 74 48  BF D6 23 8B 36 94 09 C5   ......tH ..#.6...
E420:  1E 8E 09 1E 56 57 FF D7  5F 5E 73 2B 8C DA C5 5F   ....VW.. _^s+..._
E430:  0C 3B D6 75 EF 58 1F 1E  C4 36 8E 09 26 8B 74 12   .;.u.X.. .6..&.t.
E440:  C5 1E 8A 09 8C DA 3B D0  75 D9 1F 1E 81 FF 52 24   ......;. u.....R$
E450:  74 0E BF 52 24 EB C4 5E  81 FF D6 23 74 0F EB 0A   t..R$..^ ...#t...
E460:  07 06 BF 8A 09 E8 FE 01  72 0E E8 7D 00 1F 89 16   ........ r..}....
E470:  90 09 89 1E 8E 09 EB 04  1F 33 C0 99 5F 5E 5D CB   ........ .3.._^].
E480:  06 57 8B F8 03 FB 89 7F  04 4F 4F 2D 16 00 8D 77   .W...... .OO-...w
E490:  14 C7 05 FE FF 89 7F 0A  48 89 04 8C 1F 8B C6 8C   ........ H.......
E4A0:  DA 8E C2 8D 7F 06 FC AB  AB 47 47 33 C0 AB AB AB   ........ .GG3....
E4B0:  AB 5F 07 C3 26 8B 45 02  0B C0 75 09 26 8C 5D 02   ._..&.E. ..u.&.].
E4C0:  26 89 1D EB 14 06 26 C4  75 08 26 8C 5C 0E 26 89   &.....&. u.&.\.&.
E4D0:  5C 0C 8C 47 12 89 77 10  07 26 8C 5D 0A 26 89 5D   \..G..w. .&.].&.]
E4E0:  08 26 8C 5D 06 26 89 5D  04 C3 41 80 E1 FE 53 FC   .&.].&.] ..A...S.
E4F0:  8B 77 08 8B 5F 0A 33 FF  EB 23 8B C3 5B A8 01 75   .w.._.3. .#..[..u
E500:  42 53 8B 77 06 8B 5F 08  3B DE 74 36 4B 33 FF EB   BS.w.._. ;.t6K3..
E510:  0C 90 8D 54 FE 3B D3 73  E1 03 F0 72 23 AD A8 01   ...T.;.s ...r#...
E520:  74 F0 8B FE 48 3B C1 73  23 03 F0 72 13 8B D0 AD   t...H;.s #..r....
E530:  A8 01 74 DE 03 C2 05 02  00 8B F7 89 44 FE EB E4   ..t..... ....D...
```

```
E540:  8B C0 5B 8B 47 06 89 47  08 F9 EB 19 5B 89 4C FE   ..[.G..G ....[.L.
E550:  74 09 03 F9 2B C1 48 89  05 2B F9 03 F9 89 7F 08   t...+.H. .+......
E560:  8B C6 8C DA F8 C3 51 57  F6 47 02 01 74 66 E8 D5   ......QW .G..tf..
E570:  00 8B FE 8B 04 A8 01 74  03 2B C8 49 41 41 8B 77   .......t .+.IAA.w
E580:  04 0B F6 74 4F 03 CE 73  09 33 C0 BA F0 FF E3 33   ...tO..s .3.....3
E590:  EB 42 B8 32 1F 8E C0 26  A1 98 09 3D 00 20 74 16   .B.2...& ...=. t.
E5A0:  BA 00 80 3B D0 72 06 D1  EA 75 F8 EB 22 83 FA 08   ...;.r.. .u.."...
E5B0:  72 1D D1 E2 8B C2 48 8B  D0 03 C1 73 02 33 C0 F7   r.....H. ...s.3..
E5C0:  D2 23 C2 52 E8 2E 00 5A  73 0D 83 FA F0 74 05 B8   .#.R...Z s....t..
E5D0:  10 00 EB E2 F9 EB 1B 8B  D0 2B 57 04 89 47 04 89   ........ .+W..G..
E5E0:  7F 08 8B 77 0A 4A 89 14  42 03 F2 C7 04 FE FF 89   ...w.J.. B.......
E5F0:  77 0A 5F 59 C3 8B D0 F6  47 02 04 74 0F 4A 8B 77   w._Y.... G..t.J.w
E600:  04 4E 3B D6 72 05 39 57  FE 73 36 42 53 51 8C DE   .N;.r.9W .s6BSQ..
E610:  8E C6 B1 04 D3 E8 75 03  B8 00 10 F6 47 02 04 74   ......u. ....G..t
E620:  0A 03 C6 8B 1E D2 06 2B  C3 8E C3 8B D8 B4 4A CD   .......+ ......J.
E630:  21 59 5B 72 10 8B C2 F6  47 02 04 74 04 4A 89 57   !Y[r.... G..t.J.W
E640:  FE F8 EB 01 F9 C3 57 8B  77 08 3B 77 0A 75 03 8B   ......W. w.;w.u..
E650:  77 06 AD 3D FE FF 74 08  8B FE 24 FE 03 F0 EB F2   w..=..t. ..$.....
E660:  4F 4F 8B F7 5F C3 8B D1  83 C2 27 80 E2 F0 8B DA   OO.._... ..'.....
E670:  F7 DB F7 DB F5 D1 DB D1  EB D1 EB D1 EB B4 48 CD   ........ ......H.
E680:  21 72 26 3B 06 AE 06 76  F4 3B 06 AC 06 76 03 A3   !r&;...v .;...v..
E690:  AC 06 8E D8 33 DB 26 8B  45 0C 89 47 02 8B C2 E8   ....3.&. E..G....
E6A0:  DE FD E8 0F FE F8 EB 01  F9 C3 55 8B EC 8B D7 8B   ........ ..U.....
E6B0:  DE 1E C4 7E 06 33 C0 B9  FF FF F2 AE 8D 75 FF C4   ...~.3.. .....u..
E6C0:  7E 0A B9 FF FF F2 AE F7  D1 2B F9 8C C0 8E D8 8E   ~....... .+......
E6D0:  46 08 87 FE 8B 46 06 F7  C6 01 00 74 02 A4 49 D1   F....F.. ...t..I.
E6E0:  E9 F3 A5 13 C9 F3 A4 8B  F3 8B FA 1F 8C C2 5D CB   ........ ......].
E6F0:  55 8B EC 8B D7 8B DE 1E  C5 76 0A 8B FE 8C D8 8E   U....... .v......
E700:  C0 33 C0 B9 FF FF F2 AE  F7 D1 C4 7E 06 8B C7 A8   .3...... ...~....
E710:  01 74 02 A4 49 D1 E9 F3  A5 13 C9 F3 A4 8B F3 8B   .t..I... ........
E720:  FA 1F 8C C2 5D CB 55 8B  EC 8B D7 8B DE 1E C5 76   ....].U. .......v
E730:  06 C4 7E 0A 33 C0 B9 FF  FF F2 AE F7 D1 2B F9 F3   ..~.3... .....+..
E740:  A6 74 05 1B C0 1D FF FF  1F 8B F3 8B FA 5D CB 00   .t...... .....]..
E750:  55 8B EC 8B D7 C4 7E 06  33 C0 B9 FF FF F2 AE F7   U....~. 3.......
E760:  D1 49 91 8B FA 5D CB 00  55 8B EC 56 57 B3 01 8B   .I...].. U..VW...
E770:  4E 0C 8B 46 06 33 D2 83  F9 0A 75 01 99 1E C5 7E   N..F.3.. ..u....~
E780:  08 E9 57 03 55 8B EC 56  57 8B 56 0A 0B D2 7E 56   ..W.U..V W.V...~V
E790:  4A 8B 5E 0C C4 7E 06 0B  D2 74 55 8B 4F 04 E3 1F   J.^..~.. .tU.O...
E7A0:  3B CA 76 02 8B CA 1E C5  37 B4 0A 51 AC AA 3A C4   ;.v..... 7..Q..:.
E7B0:  E0 FA 58 1F 89 37 74 33  29 47 04 2B D0 EB D8 06   ..X..7t3 )G.+....
E7C0:  53 52 1E 53 0E E8 50 E4  83 C4 04 5A 5B 07 3D FF   SR.S..P. ...Z[.=.
E7D0:  FF 74 08 AA 3C 0A 74 18  4A EB BC 3B 7E 06 74 06   .t..<.t. J..;~.t.
E7E0:  F6 47 0A 20 74 0A 33 C0  99 EB 0E 2B C1 29 47 04   .G. t.3. ...+.)G.
E7F0:  33 C0 AA 8B 46 06 8B 56  08 5F 5E 5D CB 00 55 8B   3...F..V ._^]..U.
E800:  EC 83 EC 02 57 56 FF 76  08 FF 76 06 9A 3C 26 F2   ....WV.v ..v..<&.
E810:  0B 83 C4 04 8B F8 FF 76  0C FF 76 0A E8 FD E6 83   .......v ..v.....
E820:  C4 04 8B F0 FF 76 0C FF  76 0A 57 B8 01 00 50 FF   .....v.. v.W...P.
E830:  76 08 FF 76 06 9A 04 09  F2 0B 83 C4 0C 89 46 FE   v..v.... ......F.
E840:  FF 76 0C FF 76 0A 56 E8  53 E7 83 C4 06 39 7E FE   .v..v.V. S....9~.
E850:  75 04 2B C0 EB 03 B8 FF  FF 5E 5F 8B E5 5D CB 90   u.+..... .^_..]..
E860:  55 8B EC 83 EC 04 57 56  C6 06 A0 0C 42 8B 46 06   U.....WV ....B.F.
E870:  8B 56 08 A3 9C 0C 89 16  9E 0C BE 96 0C 89 04 89   .V...... ........
E880:  54 02 C7 06 9A 0C FF 7F  8D 46 0E 16 50 FF 76 0C   T....... .F..P.v.
E890:  FF 76 0A 8B C6 1E 50 9A  FA 17 F2 0B 83 C4 0C 8B   .v....P. ........
```

```
E8A0:  F8 FF 0E 9A 0C 78 0F C4  1E 96 0C FF 06 96 0C 26   .....x.. .......&
E8B0:  C6 07 00 EB 0E 90 1E 56  2B C0 50 9A A0 0B F2 0B   .......V +.P.....
E8C0:  83 C4 06 8B C7 5E 5F 8B  E5 5D CB 90 55 8B EC 83   .....^_. .]..U...
E8D0:  EC 04 56 C6 06 AC 0C 49  8B 46 06 8B 56 08 A3 A8   ..V....I .F..V...
E8E0:  0C 89 16 AA 0C BE A2 0C  89 04 89 54 02 52 50 9A   ........ ...T.RP.
E8F0:  3C 26 F2 0B 83 C4 04 A3  A6 0C 8D 46 0E 16 50 FF   <&...... ...F..P.
E900:  76 0C FF 76 0A B8 A2 0C  1E 50 9A A6 0F F2 0B 83   v..v.... .P......
E910:  C4 0C 5E 8B E5 5D CB 90  55 8B EC 57 8B 46 06 F7   ..^..].. U..W.F..
E920:  66 08 73 05 33 C0 99 EB  1A 50 9A D0 22 F2 0B 59   f.s.3... .P.."..Y
E930:  8B D8 0B DA 74 0D 50 8B  F8 8E C2 33 C0 41 D1 E9   ....t.P. ...3.A..
E940:  F3 AB 58 5F 5D CB 55 8B  EC 8E 46 08 B4 49 CD 21   ..X_].U. ..F..I.!
E950:  5D CB 55 8B EC 56 57 8B  5E 0A 8B 46 06 F7 E3 8B   ].U..VW. ^..F....
E960:  C8 8B FA 8B 46 08 F7 E3  03 C7 8B D0 0B C1 74 1E   ....F... ......t.
E970:  33 F6 8D 47 FF 83 FA 0F  77 14 72 05 83 F9 F0 77   3..G.... w.r....w
E980:  0D 83 FA 02 77 04 72 08  E3 06 23 C3 74 18 EB 6D   ....w.r. ..#.t..m
E990:  83 FA 01 72 11 23 C3 74  0D 33 C0 F7 F3 8B F2 03   ...r.#.t .3......
E9A0:  CA 72 5A BA 01 00 8B D9  83 C3 0F 83 D2 00 B9 04   .rZ..... ........
E9B0:  00 D1 EA D1 DB E2 FA B4  48 CD 21 72 40 3B 06 AE   ........ H.!r@;..
E9C0:  06 76 F4 8B D0 03 D3 4A  3B 16 AC 06 76 04 89 16   .v.....J ;...v...
E9D0:  AC 06 8E C0 8B D0 FC B9  00 10 3B D9 73 02 8B CB   ........ ..;.s...
E9E0:  D1 E1 D1 E1 D1 E1 33 FF  33 C0 F3 AB 96 B9 00 10   ......3. 3.......
E9F0:  2B D9 76 0C 96 8C C0 03  C1 8E C0 EB DD 33 C0 99   +.v..... .....3..
EA00:  5F 5E 5D CB 55 8B EC 8C  D9 C5 5E 06 8B D3 EB 0B   _^].U... ..^.....
EA10:  2C 61 3C 1A 73 04 04 41  88 07 43 8A 07 0A C0 75   ,a<.s..A ..C....u
EA20:  EF 92 8C DA 8E D9 5D CB  55 8B EC 8B 4E 0E 1E 57   ......]. U...N..W
EA30:  56 E3 48 C5 76 0A C4 7E  06 8B C1 48 8B D7 F7 D2   V.H.v..~ ...H....
EA40:  2B C2 1B DB 23 C3 03 C2  8B D6 F7 D2 2B C2 1B DB   +...#... ....+...
EA50:  23 C3 03 C2 40 91 2B C1  D1 E9 F3 A5 13 C9 F3 A4   #...@.+. ........
EA60:  91 E3 18 0B F6 75 07 8C  D8 05 00 10 8E D8 0B FF   .....u.. ........
EA70:  75 C7 8C C0 05 00 10 8E  C0 EB BE 8B 46 06 8B 56   u....... ....F..V
EA80:  08 5E 5F 1F 5D CB 55 8B  EC 8B 4E 0C E3 38 57 C4   .^_.].U. ..N..8W.
EA90:  7E 06 8B D7 F7 DA 74 0C  2B D1 1B DB 23 D3 03 D1   ~.....t. +...#...
EAA0:  87 D1 2B D1 8B 46 0A 8A  E0 D1 E9 F3 AB 13 C9 F3   ..+..F.. ........
EAB0:  AA 87 D1 E3 10 8C C3 81  C3 00 10 8E C3 D1 E9 F3   ........ ........
EAC0:  AB 13 C9 F3 AA 5F 8B 46  06 8B 56 08 5D CB 8B 4E   ....._.F ..V.]..N
EAD0:  0E 8B 46 06 8B 56 08 1E  C5 7E 0A 57 1E 07 FC 93   ..F..V.. .~.W....
EAE0:  0A C0 74 13 83 F9 0A 75  0E 0B D2 79 0A B0 2D AA   ..t....u ...y..-.
EAF0:  F7 DB 83 D2 00 F7 DA 8B  F7 92 33 D2 0B C0 74 02   ........ ..3...t.
EB00:  F7 F1 93 F7 F1 92 87 D3  04 30 3C 39 76 02 04 27   ........ .0<9v..'
EB10:  AA 8B C2 0B C3 75 E2 88  05 4F AC 86 05 88 44 FF   .....u.. .O....D.
EB20:  8D 44 01 3B C7 72 F2 8C  DA 58 1F 5F 5E 8B E5 5D   .D.;.r.. .X._^..]
EB30:  CB 00 55 8B EC 8B 46 06  99 33 C2 2B C2 5D CB 90   ..U...F. .3.+.]..
EB40:  55 8B EC 8B 46 06 8B 56  08 0B D2 7D 07 F7 D8 83   U...F..V ...}....
EB50:  D2 00 F7 DA 5D CB 55 8B  EC 1E C5 56 06 B4 41 CD   ....].U. ...V..A.
EB60:  21 1F E9 95 DB 00 55 8B  EC 1E 53 C5 5E 06 FF 76   !.....U. ..S.^..v
EB70:  0C FF 76 0A FF 77 02 FF  37 0E E8 C5 00 89 07 89   ..v..w.. 7.......
EB80:  57 02 5B 1F 5D CA 08 00  55 8B EC 1E 53 C5 5E 06   W.[.]... U...S.^.
EB90:  8B 07 8B 57 02 8B 4E 0A  0E E8 D8 00 89 07 89 57   ...W..N. .......W
EBA0:  02 5B 1F 5D CA 06 00 00  55 8B EC 57 56 53 33 FF   .[.].... U..WVS3.
EBB0:  8B 46 08 0B C0 7D 11 47  8B 56 06 F7 D8 F7 DA 1D   .F...}.G .V......
EBC0:  00 00 89 46 08 89 56 06  8B 46 0C 0B C0 7D 11 47   ...F..V. .F...}.G
EBD0:  8B 56 0A F7 D8 F7 DA 1D  00 00 89 46 0C 89 56 0A   .V...... ...F..V.
EBE0:  0B C0 75 15 8B 4E 0A 8B  46 08 33 D2 F7 F1 8B D8   ..u..N.. F.3.....
EBF0:  8B 46 06 F7 F1 8B D3 EB  38 8B D8 8B 4E 0A 8B 56   .F...... 8...N..V
```

```
EC00: 08 8B 46 06 D1 EB D1 D9  D1 EA D1 D8 0B DB 75 F4   ..F..... ......u.
EC10: F7 F1 8B F0 F7 66 0C 91  8B 46 0A F7 E6 03 D1 72   .....f.. .F.....r
EC20: 0C 3B 56 08 77 07 72 06  3B 46 06 76 01 4E 33 D2   .;V.w.r. ;F.v.N3.
EC30: 96 4F 75 07 F7 DA F7 D8  83 DA 00 5B 5E 5F 5D CA   .Ou..... ...[^_].
EC40: 08 00 55 8B EC 8B 46 08  8B 4E 0C 0B C8 8B 4E 0A   ..U...F. .N....N.
EC50: 75 09 8B 46 06 F7 E1 5D  CA 08 00 53 F7 E1 8B D8   u..F...] ...S....
EC60: 8B 46 06 F7 66 0C 03 D8  8B 46 06 F7 E1 03 D3 5B   .F..f... .F.....[
EC70: 5D CA 08 00 32 ED E3 06  D1 E0 D1 D2 E2 FA CB 00   ]...2... ........
EC80: 55 8B EC 53 8B 5E 06 FF  76 0A FF 76 08 FF 77 02   U..S.^.. v..v..w.
EC90: FF 37 0E E8 12 FF 89 57  02 89 07 5B 5D CA 06 00   .7.....W ...[]...
ECA0: 55 8B EC 53 8B 5E 06 FF  76 0A FF 76 08 FF 77 02   U..S.^.. v..v..w.
ECB0: FF 37 0E E8 8C FF 89 07  89 57 02 5B 5D CA 06 00   .7...... .W.[]...
ECC0: 00 00 00 00 AE 0E 9A 2B  B2 00 F0 FF B0 00 66 08   .......+ ......f.
ECD0: B0 4D 53 20 52 75 6E 2D  54 69 6D 65 20 4C 69 62   .MS Run- Time Lib
ECE0: 72 61 72 79 20 2D 20 43  6F 70 79 72 69 67 68 74   rary - C opyright
ECF0: 20 28 63 29 20 31 39 39  30 2C 20 4D 69 63 72 6F    (c) 199 0, Micro
ED00: 73 6F 66 74 20 43 6F 72  70 18 00 45 6E 74 65 72   soft Cor p..Enter
ED10: 20 66 69 6E 67 65 72 20  6E 61 6D 65 3A 20 28 6F    finger  name: (o
ED20: 72 20 27 65 78 69 74 27  29 20 3E 00 25 73 00 45   r 'exit' ) >.%s.E
ED30: 58 49 54 00 63 61 6E 6E  6F 74 20 65 6E 72 6F 6C   XIT.cann ot enrol
ED40: 6C 20 66 69 6E 67 65 72  20 25 73 0A 00 0A 63 61   l finger  %s...ca
ED50: 6E 6E 6F 74 20 65 6E 72  6F 6C 6C 20 66 69 6E 67   nnot enr oll fing
ED60: 65 72 21 00 20 64 6F 6E  65 00 0A 45 6E 74 65 72   er!. don e..Enter
ED70: 20 66 69 6E 67 65 72 20  6E 61 6D 65 3A 20 28 6F    finger  name: (o
ED80: 72 20 27 65 78 69 74 27  29 20 3E 20 00 25 73 00   r 'exit' ) > .%s.
ED90: 00 53 5F 45 4E 52 00 00  00 00 25 73 25 31 64 00   .S_ENR.. ..%s%1d.
EDA0: 25 73 25 64 31 D4 00 B2  00 58 00 B0 0A 00 77 74   %s%d1... .X....wt
EDB0: 00 73 68 69 66 74 2E 64  61 74 00 25 32 68 64 00   .shift.d at.%2hd.
EDC0: 0A 00 C8 00 58 02 E8 03  54 0B B4 FB 38 FF B0 04   ....X... T...8...
EDD0: B0 04 38 FF 00 00 65 72  72 5F 74 68 2E 63 66 67   ..8...er r_th.cfg
EDE0: 00 72 74 00 25 68 64 20  25 68 64 00 25 68 64 20   .rt.%hd  %hd.%hd
EDF0: 00 25 68 64 20 25 68 64  00 25 68 64 20 25 68 64   .%hd %hd .%hd %hd
EE00: 00 25 68 64 20 25 68 64  5C 00 B2 00 12 00 B0 60   .%hd %hd \......`
EE10: 01 80 01 00 00 00 00 11  00 22 00 34 00 45 00 57   ........ .".4.E.W
EE20: 00 69 00 7A 00 8C 00 9E  00 B0 00 C2 00 D4 00 E6   .i.z.... ........
EE30: 00 F9 00 0B 01 1E 01 31  01 44 01 58 01 6B 01 7F   .......1 .D.X.k..
EE40: 01 94 01 A8 01 BD 01 D2  01 E7 01 FD 01 13 02 2A   ........ .......*
EE50: 02 41 02 58 02 70 02 89  02 A2 02 BC 02 D6 02 F1   .A.X.p.. ........
EE60: 02 0D 03 29 03 47 03 65  03 84 03 A4 03 C5 03 E8   ...).G.e ........
EE70: 03 0B 04 30 04 56 04 7E  04 A7 04 D2 04 FF 04 2F   ...0.V.~ ......./
EE80: 05 60 05 94 05 CA 05 03  06 40 06 80 06 C4 06 0C   .`...... .@......
EE90: 07 58 07 AA 07 02 08 60  08 C6 08 33 09 AB 09 2D   .X.....` ...3...-
EEA0: 0A BB 0A 58 0B 05 0C C6  0C 9F 0D 94 0E AA 0F EB   ...X.... ........
EEB0: 10 60 12 18 14 27 16 A9  18 CB 1B D0 1F 2A 25 A6   .`...'.. .....*%.
EEC0: 2C DC 37 89 4A DC 6F C9  DF 00 00 01 00 01 00 02   ,.7.J.o. ........
EED0: 00 02 00 03 00 03 00 04  00 04 00 05 00 06 00 06   ........ ........
EEE0: 00 07 00 07 00 08 00 08  00 09 00 09 00 0A 00 0B   ........ ........
EEF0: 00 0B 00 0C 00 0C 00 0D  00 0D 00 0E 00 0E 00 0F   ........ ........
EF00: 00 0F 00 10 00 11 00 11  00 12 00 12 00 13 00 13   ........ ........
EF10: 00 14 00 14 00 15 00 15  00 16 00 16 00 17 00 17   ........ ........
EF20: 00 18 00 18 00 18 00 19  00 19 00 1A 00 1A 00 1A   ........ ........
EF30: 00 1B 00 1C 00 1C 00 1D  00 1D 00 1D 00 1E 00 1E   ........ ........
EF40: 00 1F 00 1F 00 20 00 20  00 20 00 21 00 21 00 22   ..... .  . .!.!."
EF50: 00 22 00 22 00 23 00 23  00 23 00 24 00 24 00 25   .".".#.# .#.$.$.%
```

```
EF60:  00 25 00 25 00 26 00 26  00 26 00 27 00 27 00 27   .%.%.&.& .&.'.'.'
EF70:  00 28 00 28 00 28 00 29  00 29 00 29 00 2A 00 2A   .(.(.(.) .).).*.*
EF80:  00 2A 00 2B 00 2B 00 2B  00 2C 00 2C 00 2C 00 2C   .*.+.+.+ .,.,.,.,
EF90:  00 2D 00 10 27 0E 27 09  27 02 27 F7 26 E9 26 D9   .-..'.'. '.'.&.&.
EFA0:  26 C5 26 AE 26 94 26 78  26 58 26 35 26 0F 26 E6   &.&.&.&x &X&5&.&.
EFB0:  25 BB 25 8C 25 5B 25 26  25 EF 24 B4 24 77 24 37   %.%.%[%& %.$.$w$7
EFC0:  24 F5 23 AF 23 67 23 1B  23 CE 22 7D 22 2A 22 D4   $.#.#g#. #."}"*".
EFD0:  21 7B 21 20 21 C2 20 62  20 FF 1F 9A 1F 32 1F C8   !{! !. b  ....2..
EFE0:  1E 5B 1E EC 1D 7B 1D 07  1D 91 1C 19 1C 9F 1B 22   .[...{.. ......."
EFF0:  1B A3 1A 23 1A A0 19 1B  19 95 18 0C 18 82 17 F5   ...#.... ........
F000:  16 67 16 D7 15 46 15 B3  14 1E 14 88 13 F0 12 56   .g...F.. .......V
F010:  12 BB 11 1F 11 82 10 E3  0F 43 0F A2 0E FF 0D 5C   ........ .C.....\
F020:  0D B7 0C 12 0C 6B 0B C4  0A 1C 0A 73 09 C9 08 1F   .....k.. ...s....
F030:  08 74 07 C8 06 1C 06 6F  05 C2 04 15 04 67 03 B9   .t.....o .....g..
F040:  02 0B 02 5C 01 AE 00 00  00 00 00 AE 00 5C 01 0B   ...\.... .....\..
F050:  02 B9 02 67 03 15 04 C2  04 6F 05 1C 06 C8 06 74   ...g.... .o.....t
F060:  07 1F 08 C9 08 73 09 1C  0A C4 0A 6B 0B 12 0C B7   .....s.. ...k....
F070:  0C 5C 0D FF 0D A2 0E 43  0F E3 0F 82 10 1F 11 BB   .\.....C ........
F080:  11 56 12 F0 12 88 13 1E  14 B3 14 46 15 D7 15 67   .V...... ...F...g
F090:  16 F5 16 82 17 0C 18 95  18 1B 19 A0 19 23 1A A3   ........ .....#..
F0A0:  1A 22 1B 9F 1B 19 1C 91  1C 07 1D 7B 1D EC 1D 5B   ."...... ...{...[
F0B0:  1E C8 1E 32 1F 9A 1F FF  1F 62 20 C2 20 20 21 7B   ...2.... .b .  !{
F0C0:  21 D4 21 2A 22 7D 22 CE  22 1B 23 67 23 AF 23 F5   !.!*"}". ".#g#.#.
F0D0:  23 37 24 77 24 B4 24 EF  24 26 25 5B 25 8C 25 BB   #7$w$.$. $&%[%.%.
F0E0:  25 E6 25 0F 26 35 26 58  26 78 26 94 26 AE 26 C5   %.%.&5&X &x&.&.&.
F0F0:  26 D9 26 E9 26 F7 26 02  27 09 27 0E 27 10 27 01   &.&.&.&. '.'.'.'.
F100:  00 FF FF 00 00 FF FF 49  6E 73 75 66 66 69 63 69   .......I nsuffici
F110:  65 6E 74 20 6D 65 6D 6F  72 79 0A 00 20 67 65 74   ent memo ry.. get
F120:  5F 69 6D 61 67 65 20 65  72 72 6F 72 3A 20 66 69   _image e rror: fi
F130:  6C 65 20 6E 6F 74 20 63  6F 6D 70 6C 65 74 65 0A   le not c omplete.
F140:  00 A0 01 40 00 80 01 00  00 47 3A 5C 46 49 4E 47   ...@.... .G:\FING
F150:  45 52 5C 49 4D 47 44 31  31 5C 4B 03 B2 00 0D 00   ER\IMGD1 1\K.....
F160:  B0 E8 03 E8 03 46 50 32  30 30 30 2E 43 46 47 00   .....FP2 000.CFG.
F170:  70 6F 73 69 74 69 6F 6E  20 58 20 6F 75 74 20 6F   position  X out o
F180:  66 20 72 61 6E 67 65 20  25 68 64 0A 00 70 6F 73   f range  %hd..pos
F190:  69 74 69 6F 6E 20 59 20  6F 75 74 20 6F 66 20 72   ition Y  out of r
F1A0:  61 6E 67 65 20 25 68 64  0A 00 72 62 00 66 69 6C   ange %hd ..rb.fil
F1B0:  65 20 25 73 20 6E 6F 74  20 66 6F 75 6E 64 0A 00   e %s not  found..
F1C0:  20 2D 2D 20 69 6E 76 61  6C 69 64 20 6E 75 6D 62    -- inva lid numb
F1D0:  65 72 20 6F 66 20 63 6F  6C 6F 6D 6E 73 3A 20 25   er of co lomns: %
F1E0:  68 64 20 69 6E 73 74 65  61 64 20 6F 66 20 25 68   hd inste ad of %h
F1F0:  64 0A 00 20 20 2D 2D 20 69  6E 76 61 6C 69 64 20 6E  d.. -- i nvalid n
F200:  75 6D 62 65 72 20 6F 66  20 72 6F 77 73 3A 20 25   umber of  rows: %
F210:  68 64 20 69 6E 73 74 65  61 64 20 6F 66 20 25 68   hd inste ad of %h
F220:  64 0A 00 77 62 00 4B 4F  00 6C 73 65 6E 73 6F 72   d..wb.KO .lsensor
F230:  2E 63 66 67 00 72 74 00  25 68 64 00 20 53 65 6E   .cfg.rt. %hd. Sen
F240:  73 6F 72 20 23 20 25 68  64 20 6E 6F 74 20 66 6F   sor # %h d not fo
F250:  75 6E 64 20 69 6E 20 25  73 0A 00 25 68 64 00 25   und in % s..%hd.%
F260:  68 64 20 25 68 64 20 25  68 64 20 25 68 64 20 25   hd %hd % hd %hd %
F270:  68 64 20 25 68 64 20 25  68 64 00 20 25 73 20 6E   hd %hd % hd. %s n
F280:  6F 74 20 66 6F 75 6E 64  0A 00 47 3A 5C 46 49 4E   ot found ..G:\FIN
F290:  47 45 52 5C 49 4D 47 49  5C 00 47 3A 5C 46 49 4E   GER\IMGI \.G:\FIN
F2A0:  47 45 52 5C 49 4D 47 44  5C 00 47 3A 5C 46 49 4E   GER\IMGD \.G:\FIN
F2B0:  47 45 52 5C 49 4D 47 44  31 31 5C 00 49 4D 47 44   GER\IMGD 11\.IMGD
```

```
F2C0:  5C 00 00 01 00 6E 6F 20  6D 6F 72 65 20 73 61 6D   \....no  more sam
F2D0:  70 6C 65 73 0A 00 46 00  00 43 50 53 44 41 54 5C   ples..F. .CPSDAT\
F2E0:  00 25 73 25 73 2E 63 70  73 00 77 62 00 25 73 25   .%s%s.cp s.wb.%s%
F2F0:  73 2E 63 70 73 00 72 62  00 00 00 E4 01 00 00 00   s.cps.rb ........
F300:  00 05 A1 01 B2 00 15 00  B0 5F 43 5F 46 49 4C 45   ........ ._C_FILE
F310:  5F 49 4E 46 4F 3D 0D 00  B2 00 1C 00 B0 14 00 81   _INFO=.. ........
F320:  81 81 01 01 07 00 B2 00  19 00 B0 FD 06 32 1F 04   ........ .....2..
F330:  00 B2 00 0D 00 B0 FF FF  FF FF B0 0F 00 00 00 00   ........ ........
F340:  00 16 02 02 18 0D 09 0C  0C 0C 07 08 16 16 FF 02   ........ ........
F350:  0D 12 02 FF 5C 00 5C 00  00 00 B0 0C 32 1F 00 00   ....\.\. ....2...
F360:  B0 0C 32 1F 01 2F 00 B2  00 0B 00 B0 02 01 02 00   ..2../.. ........
F370:  B2 00 0A 00 B0 02 02 02  00 B2 00 0A 00 B0 84 03   ........ ........
F380:  02 00 B2 00 0A 00 B0 02  04 02 00 B2 00 B4 00 B0   ........ ........
F390:  01 00 00 02 04 00 B2 00  EC 00 B0 12 08 32 1F 04   ........ .....2..
F3A0:  00 B2 00 0C 00 B0 20 09  2D 0D 5D 00 5D 00 06 00   ...... . -.].]...
F3B0:  00 06 00 01 00 00 10 00  03 06 00 06 02 10 04 45   ........ .......E
F3C0:  45 45 05 05 05 05 05 35  30 00 50 00 00 00 00 20   EE.....5 0.P....
F3D0:  20 30 50 58 07 08 00 30  30 30 57 50 07 00 00 20    0PX...0 00WP...
F3E0:  20 00 00 00 00 00 08 60  60 60 60 60 60 00 00 70    ......` ``````..p
F3F0:  70 78 78 78 78 08 07 08  00 00 07 00 08 08 08 00   pxxxx... ........
F400:  00 08 00 08 00 00 08 28  6E 75 6C 6C 29 06 68 00   .......( null).h.
F410:  B2 00 10 00 B0 03 00 00  20 C2 02 F2 0B C2 02 F2   ........  .......
F420:  0B C2 02 F2 0B C2 02 F2  0B C2 02 F2 0B C2 02 F2   ........ ........
F430:  0B 00 00 00 00 01 01 00  23 00 B2 20 09 00 B0 28   ........ #.. ...(
F440:  28 28 28 28 05 00 B2 20  12 00 B0 48 01 00 B2 10   ((((...  ...H....
F450:  0F 00 B0 84 0A 00 B0 10  10 10 10 10 10 10 81 81   ........ ........
F460:  81 81 81 81 0D 00 B2 01  14 00 B0 10 10 10 10 10   ........ ........
F470:  10 82 82 82 82 82 82 0C  00 B2 02 14 00 B0 10 10   ........ ........
F480:  10 10 20 05 00 B2 00 85  00 B0 E2 00 E2 00 E2 00   .. ..... ........
F490:  00 00 00 00 AD 0E 0C 00  B2 00 0E 00 B0 52 0F F2   ........ .....R..
F4A0:  0B 32 1F 32 1F AE 0E AE  0E AE 0E 32 1F AE 0E 32   .2.2.... ...2...2
F4B0:  1F AE 0E AE 0E AE 0E AE  0E 32 1F 32 1F 32 1F 32   ........ .2.2.2.2
F4C0:  1F AE 0E AE 0E AE 0E AE  0E AE 0E AE 0E AE 0E AE   ........ ........
F4D0:  0E AE 0E AE 0E AE 0E AE  0E AE 0E AE 0E AE 0E AE   ........ ........
F4E0:  0E AE 0E AE 0E AE 0E AE  0E AE 0E AE 0E AE 0E AE   ........ ........
F4F0:  0E AE 0E 32 1F AE 0E AE  0E 51 1E AE 0E 32 1F AE   ...2.... .Q...2..
F500:  0E AE 0E AE 0E AE 0E AE  0E AE 0E AE 0E AE 0E AE   ........ ........
F510:  0E AE 0E AE 0E AE 0E AE  0E 32 1F 32 1F AE 0E AE   ........ .2.2....
F520:  0E AE 0E AE 0E AE 0E AE  0E AE 0E AE 0E AE 0E 32   ........ .......2
F530:  1F 3C 3C 4E 4D 53 47 3E  3E 00 00 52 36 30 30 30   .<<NMSG> >..R6000
F540:  0D 0A 2D 20 73 74 61 63  6B 20 6F 76 65 72 66 6C   ..- stac k overfl
F550:  6F 77 0D 0A 00 03 00 52  36 30 30 33 0D 0A 2D 20   ow.....R 6003..- 
F560:  69 6E 74 65 67 65 72 20  64 69 76 69 64 65 20 62   integer  divide b
F570:  79 20 30 0D 0A 00 09 00  52 36 30 30 39 0D 0A 2D   y 0..... R6009..-
F580:  20 6E 6F 74 20 65 6E 6F  75 67 68 20 73 70 61 63    not eno ugh spac
F590:  65 20 66 6F 72 20 65 6E  76 69 72 6F 6E 6D 65 6E   e for en vironmen
F5A0:  74 0D 0A 00 FC 00 0D 0A  00 FF 00 72 75 6E 2D 74   t....... ...run-t
F5B0:  69 6D 65 20 65 72 72 6F  72 20 00 02 00 52 36 30   ime erro r ...R60
F5C0:  30 32 0D 0A 2D 20 66 6C  6F 61 74 69 6E 67 2D 70   02..- fl oating-p
F5D0:  6F 69 6E 74 20 73 75 70  70 6F 72 74 20 6E 6F 74   oint sup port not
F5E0:  20 6C 6F 61 64 65 64 0D  0A 00 01 00 52 36 30 30    loaded. ....R600
F5F0:  31 0D 0A 2D 20 6E 75 6C  6C 20 70 6F 69 6E 74 65   1..- nul l pointe
F600:  72 20 61 73 73 69 67 6E  6D 65 6E 74 0D 0A 00 FF   r assign ment....
F610:  FF FF 75 01 B2 00 03 00  B0 FF FF FF FF FF FF FF   ..u..... ........
```

```
F620:  18 00 F2 0B 00 00 37 07  20 4E 1D 20 F7 1F 01 00    ......7. N. ....
F630:  52 42 8C C0 05 10 00 0E  1F A3 04 00 03 06 0C 00    RB...... ........
F640:  8E C0 8B 0E 06 00 8B F9  4F 8B F7 FD F3 A4 8B 16    ........ O.......
F650:  0E 00 50 B8 38 00 50 CB  8C C3 8C D8 2B C2 8E D8    ..P.8.P. ....+...
F660:  8E C0 BF 0F 00 B9 10 00  B0 FF F3 AE 47 8B F7 8B    ........ ....G...
F670:  C3 2B C2 8E C0 BF 0F 00  B1 04 8B C6 F7 D0 D3 E8    .+...... ........
F680:  74 09 8C DA 2B D0 8E DA  83 CE F0 8B C7 F7 D0 D3    t...+... ........
F690:  E8 74 09 8C C2 2B D0 8E  C2 83 CF F0 AC 8A D0 4E    .t...+.. .......N
F6A0:  AD 8B C8 46 8A C2 24 FE  3C B0 75 06 AC F3 AA EB    ...F..$. <.u.....
F6B0:  07 90 3C B2 75 6B F3 A4  8A C2 A8 01 74 BA BE 2D    ..<.uk.. ....t..-
F6C0:  01 0E 1F 8B 1E 04 00 FC  33 D2 AD 8B C8 E3 13 8B    ........ 3.......
F6D0:  C2 03 C3 8E C0 AD 8B F8  83 FF FF 74 11 26 01 1D    ........ ...t.&..
F6E0:  E2 F3 81 FA 00 F0 74 16  81 C2 00 10 EB DC 8C C0    ......t. ........
F6F0:  40 8E C0 83 EF 10 26 01  1D 48 8E C0 EB E2 8B C3    @.....&. .H......
F700:  8B 3E 08 00 8B 36 0A 00  03 F0 01 06 02 00 2D 10    .>...6.. ......-.
F710:  00 8E D8 8E C0 BB 00 00  FA 8E D6 8B E7 FB 2E FF    ........ ........
F720:  2F B4 40 BB 02 00 B9 16  00 8C CA 8E DA BA 17 01    /.@..... ........
F730:  CD 21 B8 FF 4C CD 21 50  61 63 6B 65 64 20 66 69    .!..L.!P acked fi
F740:  6C 65 20 69 73 20 63 6F  72 72 75 70 74 A1 02 61    le is co rrupt..a
F750:  00 5A 00 4C 00 45 00 3C  00 30 00 27 00 76 01 6F    .Z.L.E.< .0.'.v.o
F760:  01 66 01 5A 01 51 01 44  01 34 01 22 01 00 01 F4    .f.Z.Q.D .4."....
F770:  00 AF 01 9D 01 D8 01 1A  02 06 02 7B 02 B6 02 AF    ........ ...{....
F780:  02 A7 02 9E 02 97 02 8F  02 61 03 5C 03 57 03 52    ........ .a.\.W.R
F790:  03 4D 03 48 03 43 03 29  03 21 03 15 03 FD 03 F1    .M.H.C.) .!......
F7A0:  03 39 04 32 04 2A 04 21  04 1A 04 12 04 11 05 06    .9.2.*.! ........
F7B0:  05 FE 04 E2 04 D7 04 A5  04 9A 04 92 04 79 04 71    ........ .....y.q
F7C0:  04 69 04 AB 05 45 06 F7  05 F2 05 EA 05 E3 05 DB    .i...E.. ........
F7D0:  05 CF 05 C8 05 C0 05 CD  08 99 08 55 08 38 08 14    ........ ...U.8..
F7E0:  08 9E 07 28 07 E4 06 C8  06 32 0A 02 0A DE 09 59    ...(.... .2.....Y
F7F0:  09 29 0B F2 0A 4C 0D 28  0D 1D 0D DB 0C 78 11 AE    .)...L.( .....x..
F800:  12 A3 12 61 12 D5 11 20  17 4B 1B 39 1B A4 19 92    ...a...  .K.9....
F810:  19 79 18 35 18 FE 17 C7  17 92 1E 0F 1E EC 1D E1    .y.5.... ........
F820:  1D C9 1D B3 1D A8 1D 90  1D 6C 1D 20 1D 02 1D BA    ........ .l. ....
F830:  1C A7 1C 03 26 F8 25 E0  25 CA 25 B8 25 4F 25 CD    ....&.%. %.%.%O%.
F840:  26 0B 27 CA 27 B8 27 AD  27 78 27 E2 28 CF 28 C0    &.'.'.'. 'x'.(.(.
F850:  28 72 28 55 28 1B 28 C5  29 56 2A 36 2A 2F 2A 26    (r(U(.(. )V*6*/*&
F860:  2A 1F 2A 17 2A 0F 2A 06  2A FF 29 F7 29 EF 29 BA    *.*.*.*. *.).).).
F870:  2A B3 2A 19 2B 07 2B 00  2B CC 2E C3 2E 48 2E 36    *.*.+.+. +....H.6
F880:  2E 2B 2E FB 2D CD 2D C2  2D 92 2D 64 2D 1A 2D 8A    .+..-.-. -.-d-.-.
F890:  31 58 31 F5 2E CA 31 B3  31 C7 35 46 35 3F 35 37    1X1...1. 1.5F5?57
F8A0:  35 2E 35 27 35 19 35 78  34 65 34 5D 33 4B 33 71    5.5'5.5x 4e4]3K3q
F8B0:  38 6A 38 62 38 59 38 52  38 44 38 D1 37 BE 37 A7    8j8b8Y8R 8D8.7.7.
F8C0:  36 95 36 B4 38 CE 38 68  3B 2C 3B 7B 3A 56 3A 31    6.6.8.8h ;,;{:V:1
F8D0:  3A BB 39 A1 39 64 39 D3  3C B8 3C 9D 3C 72 3C 57    :.9.9d9. <.<.<r<W
F8E0:  3C E7 3B 08 3F D9 3E D2  3F B8 40 A8 40 8F 40 C9    <.;.?.>. ?.@.@.@.
F8F0:  42 BE 42 A6 42 2B 42 00  42 DC 41 C3 41 B8 41 A0    B.B.B+B. B.A.A.A.
F900:  41 85 41 6D 41 4E 41 47  41 21 41 1A 41 76 43 6F    A.AmANAG A!A.AvCo
F910:  43 E8 44 DD 44 AD 44 49  48 38 48 27 48 B7 47 A5    C.D.D.DI H8H'H.G.
F920:  47 9A 47 6A 47 2F 47 E8  46 A5 46 12 46 23 4A 09    G.GjG/G. F.F.F#J.
F930:  4A FB 49 76 49 60 49 09  4F 02 4F F1 4E EA 4E 93    J.IvI`I. O.O.N.N.
F940:  52 1B 52 08 52 37 51 24  51 0E 51 FB 50 D1 50 FA    R.R.R7Q$ Q.Q.P.P.
F950:  54 E4 54 D7 56 5C 56 03  57 64 58 5C 57 E5 59 E0    T.T.V\V. WdX\W.Y.
F960:  58 75 5B 59 5B AE 5B 5B  5F 4C 5F 43 5F 2A 5F 21    Xu[Y[.[[ _L_C_*_!
F970:  5F 0B 5F 82 5E 77 5E 64  5E 3E 5E 93 61 74 61 2F    _._.^w^d ^>^.ata/
```

```
F980:  61 10 61 D4 63 BD 63 AD  64 95 64 AB 67 A0 67 70   a.a.c.c. d.d.g.gp
F990:  67 3C 66 33 66 73 68 5A  68 64 69 08 69 8B 69 7A   g<f3fshZ hdi.i.iz
F9A0:  69 18 6B 0A 6B EE 6A D7  6A BB 6A A4 6A 88 6A 71   i.k.k.j. j.j.j.jq
F9B0:  6A 5A 6A 43 6A 27 6A 03  6A 6E 6B D7 6B C5 6B A6   jZjCj'j. jnk.k.k.
F9C0:  6B 68 6C 47 6C 4A 6E D0  6D AE 6D 8C 6D 6D 6D 45   khlGlJn. m.m.mmmE
F9D0:  6D F7 6C E8 6C C2 6C D3  70 97 70 75 70 55 70 2A   m.l.l.l. p.pupUp*
F9E0:  70 77 6F 31 6F 0F 6F ED  6E CE 6E 05 72 C1 71 B7   pwo1o.o. n.n.r.q.
F9F0:  71 71 71 4F 71 A9 73 58  73 36 73 14 73 F2 72 D1   qqqOq.sX s6s.s.r.
FA00:  72 B2 72 8F 72 42 72 3B  72 07 78 E9 77 C7 77 A5   r.r.rBr; r.x.w.w.
FA10:  77 86 77 4D 77 09 77 FF  76 D5 76 CE 76 7D 76 5B   w.wMw.w. v.v.v}v[
FA20:  76 30 76 7D 75 37 75 15  75 F3 74 D4 74 94 7B 2E   v0v}u7u. u.t.t.{.
FA30:  7B 0C 7B EB 7A CC 7A 6F  7A 2B 7A 09 7A E7 79 C5   {.{.z.zo z+z.z.y.
FA40:  79 A6 79 41 79 03 79 E1  78 BF 78 9E 78 7C 78 5C   y.yAy.y. x.x.x|x\
FA50:  78 E7 7F DC 7F B6 7F 8B  7F 7C 7F 3D 7F 2E 7F EF   x....... .|.=....
FA60:  7E E0 7E AC 7E 9D 7E 5E  7E 4F 7E 10 7E 01 7E CD   ~.~.~.~^ ~O~.~.~.
FA70:  7D BE 7D 9F 7D 7B 7D 6C  7D 38 7D 29 7D 92 80 60   }.}.}{}l }8})}..`
FA80:  80 0E 82 CF 81 90 81 51  81 80 82 F0 82 E9 82 E1   .......Q ........
FA90:  82 CA 82 1A 84 13 84 E5  83 DE 83 10 87 03 87 C0   ........ ........
FAA0:  87 9F 87 7B 87 6D 87 E6  89 22 8A 0C 8A 2B 8B 12   ...{.m.. ."...+..
FAB0:  8B E6 8A C8 8A 99 8A 7B  8A A9 8B 9B 8B 88 8B 77   .......{ .......w
FAC0:  8B 5D 8B 3B 8E 17 8E 85  8D 61 8D F8 90 EA 8F 3A   .].;.... .a.....:
FAD0:  8F 06 92 49 93 2E 93 FC  92 CA 92 AD 93 9F 93 D2   ...I.... ........
FAE0:  93 F2 93 18 94 5B 97 FD  95 DF 95 D5 95 CB 95 B3   .....[.. ........
FAF0:  95 A9 95 9F 95 B6 9E 48  9E EE 9D B3 9F 92 9F 5B   .......H .......[
FB00:  9F 11 9F 00 9F FC A3 EC  A3 C5 A3 B3 A3 8F A3 53   ........ .......S
FB10:  A3 2A A4 26 A5 0A A5 FD  A4 D9 A4 62 A4 52 A4 A8   .*.&.... ...b.R..
FB20:  A6 98 A6 46 A6 33 A6 23  A6 13 A6 FB A5 D5 A5 BA   ...F.3.# ........
FB30:  A5 8F A5 25 A7 D3 A6 C0  A6 B7 A8 91 A8 76 A8 3A   ...%.... .....v.:
FB40:  A8 28 A8 13 A8 EA A7 D7  A7 C6 A7 B3 A7 A2 A7 89   .(...... ........
FB50:  A7 8B A9 70 A9 43 A9 7B  AA 6F AA 5A AA 4C AA 0D   ...p.C.{ .o.Z.L..
FB60:  AA F3 A9 E7 A9 C2 A9 CD  AA C8 AA C3 AA BB AA B4   ........ ........
FB70:  AA AC AA 20 AB 0B AB F6  AA 5E AB 7B AB B7 AB DF   ... .... .^.{....
FB80:  AB 15 AD 00 AD E9 AC D1  AC 9F AC 8D AC 3E AC 13   ........ .....>..
FB90:  AC 7A AD 6E AD 5E AD 54  AD E9 AD 6A B2 4C B2 0A   .z.n.^.T ...j.L..
FBA0:  B2 C8 B1 86 B1 44 B1 BA  B0 94 B0 6E B0 48 B0 24   .....D.. ...n.H.$
FBB0:  B0 00 B3 DA B2 B4 B2 8E  B2 81 B3 4F B3 38 B3 94   ........ ...O.8..
FBC0:  B4 64 B4 18 B4 CD B3 0E  B5 CC B6 C2 B6 B9 B6 AF   .d...... ........
FBD0:  B6 25 B6 1F B6 17 B6 0D  B6 04 B6 FA B5 8E B7 5C   .%...... .......\
FBE0:  B7 45 B8 0B B8 C7 B7 CD  B9 C1 B9 A0 B9 05 BA F9   .E...... ........
FBF0:  B9 B1 BA 7B BB 6F BB 60  BB 4E BB 39 BB 2F BB 17   ...{.o.` .N.9./..
FC00:  BB F5 BA EE BB CB BB A8  BB 3E BC 1B BC A1 BC 66   ........ .>.....f
FC10:  BC 5B BC 07 BD CC BC C1  BC 83 BD 60 BD 3D BD D9   .[...... ...`.=..
FC20:  BD B6 BD 7A BE 6A BE 48  BE 1F BE 0C BE 07 BF F3   ...z.j.H ........
FC30:  BE C0 BE AD BE 17 BF 46  BF D4 BF D9 BF E0 BF FB   .......F ........
FC40:  BF 35 C0 D0 EA 56 C1 EF  C4 0A C6 FD C5 E3 C5 C2   .5...V.. ........
FC50:  C5 A6 C5 81 C5 6B C6 50  C6 2B C6 97 C6 E3 C9 1A   .....k.P .+......
FC60:  CA C7 CB F2 CB D7 CC 94  CD A5 CE 48 CE 83 D0 CF   ........ ...H....
FC70:  CE 96 D3 84 D3 F6 D2 DD  D6 BF D6 E4 E0 F3 E1 F9   ........ ........
FC80:  E1 9F E3 44 E6 1B E6 CA  E6 A6 E6 19 E7 FE E6 39   ...D.... .......9
FC90:  E7 54 00 FC FD FE FD 00  FE 02 FE 04 FE 06 FE 08   .T...... ........
FCA0:  FE 0A FE 0C FE 0E FE 10  FE 12 FE 14 FE 16 FE 18   ........ ........
FCB0:  FE 1A FE 1C FE 1E FE 20  FE 22 FE 24 FE 26 FE 28   .......  .".$.&.(
FCC0:  FE 2A FE 2C FE 2E FE 30  FE 32 FE 34 FE 36 FE 38   .*.,...0 .2.4.6.8
FCD0:  FE 3A FE 3C FE 3E FE 40  FE 42 FE 44 FE 46 FE 48   .:.<.>.@ .B.D.F.H
```

FCE0: FE 4A FE 4C FE 4E FE 50 FE 52 FE 54 FE 56 FE 58 .J.L.N.P .R.T.V.X
FCF0: FE 5A FE 5C FE 5E FE 60 FE 62 FE 64 FE 66 FE 68 .Z.\.^.` .b.d.f.h
FD00: FE 6A FE 6C FE 6E FE 70 FE 72 FE 74 FE 76 FE 78 .j.l.n.p .r.t.v.x
FD10: FE 7A FE 7C FE 7E FE 80 FE 82 FE 84 FE 86 FE 88 .z.|.~.. ........
FD20: FE E8 FD 1B FA FA FD 56 FA 50 FA 30 FC 8A FE BC .......V .P.0....
FD30: FC C0 FC C4 FC C8 FC CC FC D0 FC 00 00 00 00 00 ........ ........
FD40: 00 00 00 00 00 00 00 00 00 00 00 00 00 00 00 00 ........ ........
FD50: 00 00 00 00 00 00 00 .......


# APPENDIX B

EXTRACT.DMP Thursday, January 6, 1994 12:02pm Page 1


```
PSA Binary File Dump utility version 1.9
Copyright (C) 1984 by Phoenix Software Associates, Ltd.

                              Dump of EXTRACT.PCK
   . 0:  4D 5A 19 01 A9 00 00 00  20 00 1E 19 FF FF 7A 25   MZ......  .....z%
    10:  80 00 00 00 12 00 7E 14  1E 00 00 00 01 00 00 00   ......~. ........
    20:  00 00 00 00 00 00 00 00  00 00 00 00 00 00 00 00   ........ ........
    30:  00 00 00 00 00 00 00 00  00 00 00 00 00 00 00 00   ........ ........
    40:  00 00 00 00 00 00 00 00  00 00 00 00 00 00 00 00   ........ ........
    50:  00 00 00 00 00 00 00 00  00 00 00 00 00 00 00 00   ........ ........
    60:  00 00 00 00 00 00 00 00  00 00 00 00 00 00 00 00   ........ ........
    70:  00 00 00 00 00 00 00 00  00 00 00 00 00 00 00 00   ........ ........
    80:  00 00 00 00 00 00 00 00  00 00 00 00 00 00 00 00   ........ ........
    90:  00 00 00 00 00 00 00 00  00 00 00 00 00 00 00 00   ........ ........
    A0:  00 00 00 00 00 00 00 00  00 00 00 00 00 00 00 00   ........ ........
    B0:  00 00 00 00 00 00 00 00  00 00 00 00 00 00 00 00   ........ ........
    C0:  00 00 00 00 00 00 00 00  00 00 00 00 00 00 00 00   ........ ........
    D0:  00 00 00 00 00 00 00 00  00 00 00 00 00 00 00 00   ........ ........
    E0:  00 00 00 00 00 00 00 00  00 00 00 00 00 00 00 00   ........ ........
    F0:  00 00 00 00 00 00 00 00  00 00 00 00 00 00 00 00   ........ ........
   100:  00 00 00 00 00 00 00 00  00 00 00 00 00 00 00 00   ........ ........
   110:  00 00 00 00 00 00 00 00  00 00 00 00 00 00 00 00   ........ ........
   120:  00 00 00 00 00 00 00 00  00 00 00 00 00 00 00 00   ........ ........
   130:  00 00 00 00 00 00 00 00  00 00 00 00 00 00 00 00   ........ ........
   140:  00 00 00 00 00 00 00 00  00 00 00 00 00 00 00 00   ........ ........
   150:  00 00 00 00 00 00 00 00  00 00 00 00 00 00 00 00   ........ ........
   160:  00 00 00 00 00 00 00 00  00 00 00 00 00 00 00 00   ........ ........
   170:  00 00 00 00 00 00 00 00  00 00 00 00 00 00 00 00   ........ ........
   180:  00 00 00 00 00 00 00 00  00 00 00 00 00 00 00 00   ........ ........
   190:  00 00 00 00 00 00 00 00  00 00 00 00 00 00 00 00   ........ ........
   1A0:  00 00 00 00 00 00 00 00  00 00 00 00 00 00 00 00   ........ ........
   1B0:  00 00 00 00 00 00 00 00  00 00 00 00 00 00 00 00   ........ ........
   1C0:  00 00 00 00 00 00 00 00  00 00 00 00 00 00 00 00   ........ ........
   1D0:  00 00 00 00 00 00 00 00  00 00 00 00 00 00 00 00   ........ ........
   1E0:  00 00 00 00 00 00 00 00  00 00 00 00 00 00 00 00   ........ ........
   1F0:  00 00 00 00 00 00 00 00  00 00 00 00 00 00 00 00   ........ ........
   200:  55 8B EC 81 EC 24 01 57  56 8E 06 44 0D 26 C7 06   U....$.W V..D.&..
   210:  26 84 00 00 8E 06 46 0D  26 C7 06 DE 00 00 00 9A   &.....F. &.......
   220:  4C 07 45 01 B8 06 00 50  9A 02 00 A8 0B 83 C4 02   L.E....P ........
   230:  8D 46 F0 16 50 8D 46 F2  16 50 9A B5 05 45 01 83   .F..P.F. .P...E..
   240:  C4 08 9A 0E 08 45 01 B8  1A 04 B9 1D 24 51 50 8D   .....E.. ....$QP.
   250:  86 EC FE 16 50 9A 9C 25  AB 10 83 C4 08 B8 42 00   ....P..% ......B.
   260:  1E 50 8D 86 EC FE 16 50  9A 56 25 AB 10 83 C4 08   .P.....P .V%.....
   270:  B8 F2 77 B9 C2 13 51 50  B8 00 00 50 8D 8E EC FE   ..w...QP ...P....
   280:  16 51 9A 2D 2F AB 10 83  C4 0A 3D 00 00 75 03 E9   .Q.-/... ..=..u..
   290:  19 00 B8 48 00 1E 50 9A  5C 0A AB 10 83 C4 04 B8   ...H..P. \.......
   2A0:  00 00 50 9A DD 01 AB 10  83 C4 02 B8 59 00 1E 50   ..P..... ....Y..P
   2B0:  9A 5C 0A AB 10 83 C4 04  8D 46 F4 16 50 B9 75 00   .\...... .F..P.u.
   2C0:  1E 51 9A A0 0A AB 10 83  C4 08 B8 78 00 1E 50 8D   .Q...... ...x..P.
   2D0:  46 F4 16 50 9A D2 25 AB  10 83 C4 08 3D 00 00 74   F..P..%. ....=..t
   2E0:  03 E9 0C 00 B8 00 00 50  9A DD 01 AB 10 83 C4 02   .......P ........
   2F0:  9A 88 05 45 01 C7 86 DE  FE 00 00 C7 46 FE 01 00   ...E.... ....F...
   300:  E9 03 00 FF 46 FE 83 7E  FE 0A 7C 03 E9 0A 01 FF   ....F..~ ..|.....
   310:  76 FE 8D 46 F4 16 50 B8  7D 00 1E 50 8D 86 E0 FE   v..F..P. }..P....
```

```
320:  16 50 9A 5A 28 AB 10 83  C4 0E 8D 86 E0 FE 16 50   .P.Z(... .......P
330:  B8 1A 04 B9 1D 24 51 50  B8 83 00 1E 50 8D 86 EC   .....$QP ....P...
340:  FE 16 50 9A 5A 28 AB 10  83 C4 10 B8 F2 77 B9 C2   ..P.Z(.. .....w..
350:  13 51 50 B8 00 00 50 8D  8E EC FE 16 51 9A 2D 2F   .QP...P. ....Q.-/
360:  AB 10 83 C4 0A 3D 00 00  74 03 E9 26 00 8D 46 F0   .....=.. t..&..F.
370:  16 50 8D 46 F2 16 50 B8  00 00 50 50 50 8D 8E EC   .P.F..P. ..PPP...
380:  FE 16 51 50 9A 04 00 45  01 83 C4 14 0B D0 74 03   ..QP...E ......t.
390:  E9 20 00 83 BE DE FE 00  74 03 E9 13 00 8D 86 EC   . ...... t.......
3A0:  FE 16 50 B8 8C 00 1E 50  9A 5C 0A AB 10 83 C4 08   ..P....P .\......
3B0:  E9 63 00 8D 86 E0 FE 16  50 B8 9F 00 1E 50 9A 5C   .c...... P....P.\
3C0:  0A AB 10 83 C4 08 C7 86  DE FE 01 00 9A 88 00 A8   ........ ........
3D0:  0B 89 86 DC FE 83 BE DC  FE 00 75 03 E9 14 00 FF   ........ ..u.....
3E0:  B6 DC FE B8 B2 00 1E 50  9A 5C 0A AB 10 83 C4 06   .......P .\......
3F0:  E9 23 00 B8 2A 84 B9 C2  13 51 50 8D 86 E0 FE 16   .#..*... .QP.....
400:  50 9A 6A 02 71 10 83 C4  08 B8 CF 00 1E 50 9A 5C   P.j.q... .....P.\
410:  0A AB 10 83 C4 04 E9 EA  FE E9 8F FE 9A 74 00 A8   ........ .....t..
420:  0B 5E 5F 8B E5 5D CB 55  8B EC 81 EC 00 00 57 56   .^_..].U ......WV
430:  5E 5F 8B E5 5D CB 55 8B  EC 81 EC 00 00 57 56 5E   ^_..].U. .....WV^
440:  5F 8B E5 5D CB 00 55 8B  EC 81 EC 00 00 57 56 83   _..]..U. .....WV.
450:  7E 06 00 7C 03 E9 05 00  81 46 06 68 01 83 7E 06   ~..|.... .F.h..~.
460:  5A 7E 03 E9 18 00 83 7E  06 00 7D 03 E9 0F 00 8B   Z~.....~ ..}.....
470:  5E 06 D1 E3 8B 87 20 03  E9 5E 00 E9 5B 00 81 7E   ^..... . .^..[..~
480:  06 B4 00 7E 03 E9 1B 00  83 7E 06 5A 7F 03 E9 12   ...~.... .~.Z....
490:  00 BB 88 04 8B 46 06 D1  E0 2B D8 8B 07 E9 39 00   .....F.. .+....9.
4A0:  E9 36 00 81 7E 06 0E 01  7E 03 E9 1B 00 81 7E 06   .6..~... ~.....~.
4B0:  B4 00 7D 03 E9 11 00 8B  5E 06 D1 E3 8B 87 B8 01   ..}..... ^.......
4C0:  F7 D8 E9 14 00 E9 11 00  BB F0 05 8B 46 06 D1 E0   ........ ....F...
4D0:  2B D8 8B 07 F7 D8 E9 00  00 5E 5F 8B E5 5D CB 55   +....... .^_..].U
4E0:  8B EC 81 EC 00 00 57 56  83 7E 06 00 7C 03 E9 05   ......WV .~..|...
4F0:  00 81 46 06 68 01 83 7E  06 5A 7E 03 E9 18 00 83   ..F.h..~ .Z~.....
500:  7E 06 00 7D 03 E9 0F 00  8B 5E 06 D1 E3 8B 87 6A   ~..}.... .^.....j
510:  02 E9 5E 00 E9 5B 00 81  7E 06 B4 00 7E 03 E9 1D   ..^..[.. ~...~...
520:  00 83 7E 06 5A 7F 03 E9  14 00 BB D2 03 8B 46 06   ..~.Z... ......F.
530:  D1 E0 2B D8 8B 07 F7 D8  E9 37 00 E9 34 00 81 7E   ..+..... .7..4..~
540:  06 0E 01 7E 03 E9 1B 00  81 7E 06 B4 00 7D 03 E9   ...~.... .~...}..
550:  11 00 8B 5E 06 D1 E3 8B  87 02 01 F7 D8 E9 12 00   ...^.... ........
560:  E9 0F 00 BB 3A 05 8B 46  06 D1 E0 2B D8 8B 07 E9   ....:..F ...+....
570:  00 00 5E 5F 8B E5 5D CB  55 8B EC 81 EC 08 00 57   ..^_..]. U......W
580:  56 8B 46 08 0B 46 06 74  03 E9 09 00 B8 00 00 BA   V.F..F.t ........
590:  00 00 E9 73 00 C7 46 FC  E8 03 C7 46 FE 00 00 C7   ...s..F. ...F....
5A0:  46 F8 E7 03 C7 46 FA 00  00 8B 46 FC 8B 56 FE 39   F....F.. ..F..V.9
5B0:  56 FA 7E 03 E9 48 00 7D  03 E9 08 00 39 46 F8 72   V.~..H.} ....9F.r
5C0:  03 E9 3B 00 8B 46 F8 8B  56 FA 89 46 FC 89 56 FE   ..;..F.. V..F..V.
5D0:  B8 02 00 BA 00 00 52 50  FF 76 FE FF 76 FC FF 76   ......RP .v..v..v
5E0:  08 FF 76 06 9A DA 2F AB  10 03 46 FC 13 56 FE 52   ..v.../. ..F..V.R
5F0:  50 9A DA 2F AB 10 89 46  F8 89 56 FA E9 AA FF 8B   P../...F ..V.....
600:  46 F8 8B 56 FA E9 00 00  5E 5F 8B E5 5D CB 55 8B   F..V.... ^_..].U.
610:  EC 81 EC 06 00 57 56 83  7E 08 00 74 03 E9 1A 00   .....WV. ~..t....
620:  83 7E 06 00 74 03 E9 09  00 B8 FF FF E9 AF 00 E9   .~..t... ........
630:  05 00 C7 46 FE 5A 00 E9  7A 00 83 7E 06 00 74 03   ...F.Z.. z..~..t.
640:  E9 08 00 C7 46 FE 00 00  E9 69 00 FF 76 08 9A 04   ....F... .i..v...
650:  2F AB 10 83 C4 02 89 46  FC FF 76 06 9A 04 2F AB   /......F ..v.../.
660:  10 83 C4 02 89 46 FA 8B  46 FC 39 46 FA 7C 03 E9   .....F.. F.9F.|..
670:  21 00 8B 46 FC 99 52 50  B8 64 00 F7 6E FA 52 50   !..F..RP .d..n.RP
```

```
EXTRACT.DMP          Thursday, January  6, 1994  12:02pm                 Page 3

680:  9A DA 2F AB 10 8B D8 D1  E3 8B 87 A0 01 89 46 FE   ../..... ......F.
690:  E9 21 00 8B 46 FA 99 52  50 B8 64 00 F7 6E FC 52   .!..F..R P.d..n.R
6A0:  50 9A DA 2F AB 10 8B D8  D1 E3 B8 5A 00 2B 87 A0   P../.... ...Z.+..
6B0:  01 89 46 FE 83 7E 08 00  7C 03 E9 09 00 B8 B4 00   ..F..~.. |.......
6C0:  2B 46 FE 89 46 FE 83 7E  06 00 7F 03 E9 09 00 B8   +F..F..~ ........
6D0:  68 01 2B 46 FE 89 46 FE  8B 46 FE E9 00 00 5E 5F   h.+F..F. .F....^_
6E0:  8B E5 5D CB 55 8B EC 81  EC 06 00 57 56 C7 46 FE   ..].U... ...WV.F.
6F0:  01 00 8B 46 06 89 46 FA  83 7E FA 00 7C 03 E9 05   ...F..F. .~..|...
700:  00 81 46 FA 68 01 81 7E  FA B4 00 7D 03 E9 05 00   ..F.h..~ ...}....
710:  81 6E FA B4 00 83 7E FA  5A 74 03 E9 06 00 B8 FF   .n....~. Zt......
720:  FF E9 2C 00 83 7E FA 5A  7F 03 E9 0E 00 B8 B4 00   ..,..~.Z ........
730:  2B 46 FA 89 46 FA C7 46  FE FF FF 8B 5E FA D1 E3   +F..F..F ....^...
740:  8B 87 EC 00 F7 6E FE 89  46 FC 8B 46 FC E9 00 00   .....n.. F..F....
750:  5E 5F 8B E5 5D CB 55 8B  EC 81 EC 02 00 57 56 B8   ^_..].U. .....WV.
760:  1A 00 F7 6E 0A 8B F0 C4  5E 06 26 83 78 04 FF 75   ...n.... ^.&.x..u
770:  03 E9 37 00 B8 1A 00 F7  6E 0A 8B F0 C4 5E 06 26   ..7..... n....^.&
780:  8B 40 0A 8B C8 B8 1A 00  F7 6E 0A 8B F0 C4 5E 06   .@...... .n....^.
790:  26 39 48 04 75 03 E9 12  00 B8 1A 00 F7 6E 0A 8B   &9H.u... .....n..
7A0:  F0 C4 5E 06 26 8B 40 04  E9 FF 00 B8 1A 00 F7 6E   ..^.&.@. .......n
7B0:  0A 8B F0 C4 5E 06 26 83  78 10 FF 75 03 E9 37 00   ....^.&. x..u..7.
7C0:  B8 1A 00 F7 6E 0A 8B F0  C4 5E 06 26 8B 40 10 8B   ....n... .^.&.@..
7D0:  C8 B8 1A 00 F7 6E 0A 8B  F0 C4 5E 06 26 39 48 0A   .....n.. ..^.&9H.
7E0:  75 03 E9 12 00 B8 1A 00  F7 6E 0A 8B F0 C4 5E 06   u....... .n....^.
7F0:  26 8B 40 10 E9 B3 00 B8  1A 00 F7 6E 0A 8B F0 C4   &.@..... ...n....
800:  5E 06 26 8B 40 0A 89 46  FE B8 1A 00 F7 6E FE 8B   ^.&.@..F .....n..
810:  F0 C4 5E 06 8B 46 0A 26  39 40 04 74 03 E9 63 00   ..^..F.& 9@.t..c.
820:  B8 1A 00 F7 6E FE 8B F0  C4 5E 06 8B 46 0A 26 39   ....n... .^..F.&9
830:  40 10 75 03 E9 4C 00 B8  1A 00 F7 6E FE 8B F0 C4   @.u..L.. ...n....
840:  5E 06 26 83 78 10 FF 75  03 E9 37 00 B8 1A 00 F7   ^.&.x..u ..7.....
850:  6E FE 8B F0 C4 5E 06 26  8B 40 10 8B C8 B8 1A 00   n....^.& .@......
860:  F7 6E FE 8B F0 C4 5E 06  26 39 48 0A 75 03 E9 12   .n....^. &9H.u...
870:  00 B8 1A 00 F7 6E FE 8B  F0 C4 5E 06 26 8B 40 10   .....n.. ..^.&.@.
880:  E9 27 00 8B 46 FE 89 46  0A B8 1A 00 F7 6E 0A 8B   .'..F..F .....n..
890:  F0 C4 5E 06 26 8B 40 0A  89 46 FE 40 74 03 E9 06   ..^.&.@. .F.@t...
8A0:  00 B8 FF FF E9 03 00 E9  5F FF 5E 5F 8B E5 5D CB   ........ _.^_..].
8B0:  55 8B EC 81 EC 00 00 57  56 8B 46 0A 2B 46 06 50   U......W V.F.+F.P
8C0:  8B 46 0C 2B 46 08 50 9A  CE 01 24 00 83 C4 04 E9   .F.+F.P. ..$.....
8D0:  00 00 5E 5F 8B E5 5D CB  55 8B EC 81 EC 02 00 57   ..^_..]. U......W
8E0:  56 FF 76 14 FF 76 12 FF  76 10 FF 76 0E 9A 60 01   V.v..v.. v..v..`.
8F0:  55 00 83 C4 08 FF 76 0C  FF 76 0A FF 76 08 FF 76   U.....v. .v..v..v
900:  06 8B F0 9A 60 01 55 00  83 C4 08 2B C6 89 46 FE   ....`.U. ...+..F.
910:  81 7E FE B4 00 7F 03 E9  09 00 8B 46 FE 2D 68 01   .~...... ...F.-h.
920:  E9 16 00 81 7E FE 4C FF  7D 03 E9 06 00 8B 46 FE   ....~.L. }.....F.
930:  E9 06 00 8B 46 FE 05 68  01 E9 00 00 5E 5F 8B E5   ....F..h ....^_..
940:  5D CB 55 8B EC 81 EC 08  00 57 56 FF 36 8C 0E FF   ].U..... .WV.6...
950:  36 8A 0E C4 5E 06 26 8B  07 99 52 50 9A 74 30 AB   6...^.&. ..RP.t0.
960:  10 FF 36 98 0E FF 36 96  0E C4 5E 0A 8B C8 26 8B   ..6...6. ..^...&.
970:  07 8B DA 99 52 50 8B F1  8B FB 9A 74 30 AB 10 03   ....RP.. ...t0...
980:  F0 13 FA 03 36 A2 0E 13  3E A4 0E 81 C6 88 13 83   ....6... >.......
990:  D7 00 89 76 FC 89 7E FE  FF 36 90 0E FF 36 8E 0E   ...v..~. .6...6..
9A0:  C4 5E 06 26 8B 07 99 52  50 9A 74 30 AB 10 FF 36   .^.&...R P.t0...6
9B0:  9C 0E FF 36 9A 0E C4 5E  0A 8B C8 26 8B 07 8B DA   ...6...^ ...&....
9C0:  99 52 50 8B F1 8B FB 9A  74 30 AB 10 03 F0 13 FA   .RP..... t0......
9D0:  03 36 A6 0E 13 3E A8 0E  81 C6 88 13 83 D7 00 89   .6...>.. ........
```

```
9E0:  76 F8 89 7E FA B8 10 27  BA 00 00 52 50 FF 76 FE   v..~...' ...RP.v.
9F0:  FF 76 FC 9A DA 2F AB 10  C4 5E 06 26 89 07 B8 10   .v.../.. .^.&....
A00:  27 BA 00 00 52 50 FF 76  FA FF 76 F8 9A DA 2F AB   '...RP.v ..v.../.
A10:  10 C4 5E 0A 26 89 07 5E  5F 8B E5 5D CB 55 8B EC   ..^.&..^ _..].U..
A20:  81 EC 06 00 57 56 FF 76  14 FF 76 12 FF 76 10 FF   ....WV.v ..v..v..
A30:  76 0E FF 76 0C FF 76 0A  FF 76 08 FF 76 06 9A 88   v..v..v. .v..v...
A40:  01 55 00 83 C4 10 89 46  FA 83 7E FA 00 7C 03 E9   .U.....F ..~..|..
A50:  27 00 8B 46 FA F7 D8 50  9A 9F 00 24 00 83 C4 02   '..F...P ...$....
A60:  89 46 FE 8B 46 FA F7 D8  50 9A 06 00 24 00 83 C4   .F..F... P...$...
A70:  02 F7 D8 89 46 FC E9 1C  00 FF 76 FA 9A 9F 00 24   ....F... ..v....$
A80:  00 83 C4 02 89 46 FE FF  76 FA 9A 06 00 24 00 83   .....F.. v....$..
A90:  C4 02 89 46 FC 8B 46 FE  99 A3 8A 0E 89 16 8C 0E   ...F..F. ........
AA0:  8B 46 FC F7 D8 99 A3 96  0E 89 16 98 0E 8B 46 08   .F...... ......F.
AB0:  F7 D8 F7 6E FC 8B C8 8B  46 06 F7 D8 8B DA F7 6E   ...n.... F......n
AC0:  FE 2B C1 1B D3 8B C8 B8  10 27 8B DA F7 6E 0E 03   .+...... .'...n..
AD0:  C1 13 D3 A3 A2 0E 89 16  A4 0E 8B 46 FC 99 A3 8E   ........ ...F....
AE0:  0E 89 16 90 0E 8B 46 FE  99 A3 9A 0E 89 16 9C 0E   ......F. ........
AF0:  8B 46 08 F7 D8 F7 6E FE  8B C8 8B 46 06 F7 D8 8B   .F....n. ...F....
B00:  DA F7 6E FC 03 C8 13 DA  B8 10 27 F7 6E 10 03 C8   ..n..... ..'.n...
B10:  13 DA 89 0E A6 0E 89 1E  A8 0E 2B C0 A3 94 0E A3   ........ ..+.....
B20:  92 0E 2B C0 A3 A0 0E A3  9E 0E C7 06 AA 0E 01 00   ..+..... ........
B30:  C7 06 AC 0E 00 00 5E 5F  8B E5 5D CB 55 8B EC 81   ......^_ ..].U...
B40:  EC 0C 00 57 56 83 7E 0A  FF 75 03 E9 07 02 B8 1A   ...WV.~. .u......
B50:  00 F7 6E 0A 03 46 06 8B  56 08 05 04 00 1E 8D 7E   ..n..F.. V......~
B60:  F8 8B F0 16 07 8E DA A5  A5 A5 1F B8 1A 00 F7 6E   ........ .......n
B70:  0A 8B F0 C4 5E 06 26 83  78 0A FF 74 03 E9 08 00   ....^.&. x..t....
B80:  C7 46 F4 02 00 E9 30 00  B8 1A 00 F7 6E 0A 8B F0   .F....0. ....n...
B90:  C4 5E 06 B8 1A 00 26 F7  68 0A 8B F0 C4 5E 06 8B   .^....&. h....^..
BA0:  46 0A 26 39 40 04 74 03  E9 08 00 C7 46 F4 02 00   F.&9@.t. ....F...
BB0:  E9 05 00 C7 46 F4 16 00  8B 46 0C E9 6F 01 B8 1A   ....F... .F..o...
BC0:  00 F7 6E 0A 03 46 06 8B  56 08 05 10 00 8B C8 B8   ..n..F.. V.......
BD0:  1A 00 8B DA F7 6E 0A 8B  F0 8B C3 C4 5E 06 1E 8D   .....n.. ....^...
BE0:  78 04 8B F1 8E D8 A5 A5  A5 1F B8 1A 00 F7 6E 0A   x....... ......n.
BF0:  03 46 06 8B 56 08 05 0A  00 8B C8 B8 1A 00 8B DA   .F..V... ........
C00:  F7 6E 0A 8B F0 8B C3 C4  5E 06 1E 8D 78 10 8B F1   .n...... ^...x...
C10:  8E D8 A5 A5 A5 1F B8 1A  00 F7 6E 0A 8B F0 C4 5E   ........ ..n....^
C20:  06 8D 78 0A 8D 76 F8 A5  A5 A5 FF 76 F4 B8 1A 00   ..x..v.. ...v....
C30:  F7 6E 0A 8B F0 C4 5E 06  26 FF 70 10 FF 76 08 FF   .n....^. &.p..v..
C40:  76 06 9A 11 06 55 00 83  C4 08 89 46 F6 B8 0A 00   v....U.. ...F....
C50:  50 B8 1A 00 F7 6E 0A 8B  F0 C4 5E 06 26 FF 70 0A   P....n.. ..^.&.p.
C60:  FF 76 08 FF 76 06 9A 11  06 55 00 83 C4 08 89 46   .v..v... .U.....F
C70:  FE E9 C9 00 B8 1A 00 F7  6E 0A 03 46 06 8B 56 08   ........ n..F..V.
C80:  05 0A 00 8B C8 B8 1A 00  8B DA F7 6E 0A 8B F0 8B   ........ ...n....
C90:  C3 C4 5E 06 1E 8D 78 04  8B F1 8E D8 A5 A5 A5 1F   ..^...x. ........
CA0:  B8 1A 00 F7 6E 0A 03 46  06 8B 56 08 05 10 00 8B   ....n..F ..V.....
CB0:  C8 B8 1A 00 8B DA F7 6E  0A 8B F0 8B C3 C4 5E 06   .......n ......^.
CC0:  1E 8D 78 0A 8B F1 8E D8  A5 A5 A5 1F B8 1A 00 F7   ..x..... ........
CD0:  6E 0A 8B F0 C4 5E 06 8D  78 10 8D 76 F8 A5 A5 A5   n....^.. x..v....
CE0:  FF 76 F4 B8 1A 00 F7 6E  0A 8B F0 C4 5E 06 26 FF   .v.....n ....^.&.
CF0:  70 04 FF 76 08 FF 76 06  9A 11 06 55 00 83 C4 08   p..v..v. ...U....
D00:  89 46 F6 B8 F4 FF 50 B8  1A 00 F7 6E 0A 8B F0 C4   .F....P. ...n....
D10:  5E 06 26 FF 70 0A FF 76  08 FF 76 06 9A 11 06 55   ^.&.p..v ..v....U
D20:  00 83 C4 08 89 46 FE E9  13 00 E9 10 00 40 75 03   .....F.. .....@u.
D30:  E9 41 FF 48 48 75 03 E9  84 FE E9 00 00 83 7E FE   .A.HHu.. ......~.
```

```
 D40:  FF 75 03 E9 09 00 8B 46  FE E9 0F 00 E9 06 00 8B   .u.....F ........
 D50:  46 0A E9 06 00 B8 FF FF  E9 00 00 5E 5F 8B E5 5D   F....... ...^_..]
 D60:  CB 55 8B EC 81 EC 0A 00  57 56 83 7E 0A FF 75 03   .U...... WV.~..u.
 D70:  E9 CC 03 8B 46 0C E9 7F  03 B8 1A 00 F7 6E 0A 03   ....F... .....n..
 D80:  46 06 8B 56 08 05 04 00  1E 8D 7E F8 8B F0 16 07   F..V.... ..~.....
 D90:  8E DA A5 A5 A5 1F B8 1A  00 F7 6E 0A 03 46 06 8B   ........ ..n..F..
 DA0:  56 08 05 10 00 8B C8 B8  1A 00 8B DA F7 6E 0A 8B   V....... .....n..
 DB0:  F0 8B C3 C4 5E 06 1E 8D  78 04 8B F1 8E D8 A5 A5   ....^... x.......
 DC0:  A5 1F B8 1A 00 F7 6E 0A  03 46 06 8B 56 08 05 0A   ......n. .F..V...
 DD0:  00 8B C8 B8 1A 00 8B DA  F7 6E 0A 8B F0 8B C3 C4   ........ .n......
 DE0:  5E 06 1E 8D 78 10 8B F1  8E D8 A5 A5 A5 1F B8 1A   ^...x... ........
 DF0:  00 F7 6E 0A 8B F0 C4 5E  06 8D 78 0A 8D 76 F8 A5   ..n....^ ..x..v..
 E00:  A5 A5 B8 0A 00 50 B8 1A  00 F7 6E 0A 8B F0 C4 5E   .....P.. ..n....^
 E10:  06 26 FF 70 0A FF 76 08  FF 76 06 9A 11 06 55 00   .&.p..v. .v....U.
 E20:  83 C4 08 89 46 FE E9 F2  02 B8 1A 00 F7 6E 0A 03   ....F... .....n..
 E30:  46 06 8B 56 08 05 10 00  1E 8D 7E F8 8B F0 16 07   F..V.... ..~.....
 E40:  8E DA A5 A5 A5 1F B8 1A  00 F7 6E 0A 03 46 06 8B   ........ ..n..F..
 E50:  56 08 05 04 00 8B C8 B8  1A 00 8B DA F7 6E 0A 8B   V....... .....n..
 E60:  F0 8B C3 C4 5E 06 1E 8D  78 10 8B F1 8E D8 A5 A5   ....^... x.......
 E70:  A5 1F B8 1A 00 F7 6E 0A  03 46 06 8B 56 08 05 0A   ......n. .F..V...
 E80:  00 8B C8 B8 1A 00 8B DA  F7 6E 0A 8B F0 8B C3 C4   ........ .n......
 E90:  5E 06 1E 8D 78 04 8B F1  8E D8 A5 A5 A5 1F B8 1A   ^...x... ........
 EA0:  00 F7 6E 0A 8B F0 C4 5E  06 8D 78 0A 8D 76 F8 A5   ..n....^ ..x..v..
 EB0:  A5 A5 B8 F4 FF 50 B8 1A  00 F7 6E 0A 8B F0 C4 5E   .....P.. ..n....^
 EC0:  06 26 FF 70 0A FF 76 08  FF 76 06 9A 11 06 55 00   .&.p..v. .v....U.
 ED0:  83 C4 08 89 46 FE E9 42  02 B8 1A 00 F7 6E 0A 03   ....F..B .....n..
 EE0:  46 06 8B 56 08 05 10 00  1E 8D 7E F8 8B F0 16 07   F..V.... ..~.....
 EF0:  8E DA A5 A5 A5 1F B8 1A  00 F7 6E 0A 8B F0 C4 5E   ........ ..n....^
 F00:  06 26 83 78 0A FF 74 03  E9 0E 00 8B 46 0A 89 46   .&.x..t. ....F..F
 F10:  FE C7 46 F6 FF FF E9 30  00 B8 1A 00 F7 6E 0A 8B   ..F....0 .....n..
 F20:  F0 C4 5E 06 B8 1A 00 26  F7 68 0A 8B F0 C4 5E 06   ..^....& .h....^.
 F30:  8B 46 0A 26 39 40 04 74  03 E9 08 00 C7 46 F6 02   .F.&9@.t .....F..
 F40:  00 E9 05 00 C7 46 F6 16  00 B8 1A 00 F7 6E 0A 03   .....F.. .....n..
 F50:  46 06 8B 56 08 05 0A 00  8B C8 B8 1A 00 8B DA F7   F..V.... ........
 F60:  6E 0A 8B F0 8B C3 C4 5E  06 1E 8D 78 10 8B F1 8E   n......^ ...x....
 F70:  D8 A5 A5 A5 1F B8 1A 00  F7 6E 0A 03 46 06 8B 56   ........ .n..F..V
 F80:  08 05 04 00 8B C8 B8 1A  00 8B DA F7 6E 0A 8B F0   ........ ....n...
 F90:  8B C3 C4 5E 06 1E 8D 78  0A 8B F1 8E D8 A5 A5 A5   ...^...x ........
 FA0:  1F B8 1A 00 F7 6E 0A 8B  F0 C4 5E 06 8D 78 04 8D   .....n.. ..^..x..
 FB0:  76 F8 A5 A5 A5 83 7E F6  FF 74 03 E9 03 00 E9 5A   v.....~. .t.....Z
 FC0:  01 FF 76 F6 B8 1A 00 F7  6E 0A 8B F0 C4 5E 06 26   ..v..... n....^.&
 FD0:  FF 70 10 FF 76 08 FF 76  06 9A 11 06 55 00 83 C4   .p..v..v ....U...
 FE0:  08 89 46 FE E9 34 01 B8  1A 00 F7 6E 0A 03 46 06   ..F..4.. ...n..F.
 FF0:  8B 56 08 05 10 00 1E 8D  7E F8 8B F0 16 07 8E DA   .V...... ~.......
1000:  A5 A5 A5 1F B8 1A 00 F7  6E 0A 8B F0 C4 5E 06 26   ........ n....^.&
1010:  83 78 0A FF 74 03 E9 0E  00 8B 46 0A 89 46 FE C7   .x..t... ..F..F..
1020:  46 F6 FF FF E9 30 00 B8  1A 00 F7 6E 0A 8B F0 C4   F....0.. ...n....
1030:  5E 06 B8 1A 00 26 F7 68  0A 8B F0 C4 5E 06 8B 46   ^....&.h ....^..F
1040:  0A 26 39 40 04 74 03 E9  08 00 C7 46 F6 02 00 E9   .&9@.t.. ...F....
1050:  05 00 C7 46 F6 16 00 B8  1A 00 F7 6E 0A 03 46 06   ...F.... ...n..F.
1060:  8B 56 08 05 04 00 8B C8  B8 1A 00 8B DA F7 6E 0A   .V...... ......n.
1070:  8B F0 8B C3 C4 5E 06 1E  8D 78 10 8B F1 8E D8 A5   .....^.. .x......
1080:  A5 A5 1F B8 1A 00 F7 6E  0A 03 46 06 8B 56 08 05   .......n ..F..V..
1090:  0A 00 8B C8 B8 1A 00 8B  DA F7 6E 0A 8B F0 8B C3   ........ ..n.....
```

```
10A0:  C4 5E 06 1E 8D 78 04 8B  F1 8E D8 A5 A5 A5 1F B8   .^...x.. ........
10B0:  1A 00 F7 6E 0A 8B F0 C4  5E 06 8D 78 0A 8D 76 F8   ...n.... ^..x..v.
10C0:  A5 A5 A5 83 7E F6 FF 74  03 E9 03 00 E9 4C 00 FF   ....~..t .....L..
10D0:  76 F6 B8 1A 00 F7 6E 0A  8B F0 C4 5E 06 26 FF 70   v.....n. ...^.&.p
10E0:  04 FF 76 08 FF 76 06 9A  11 06 55 00 83 C4 08 89   ..v..v.. ..U.....
10F0:  46 FE E9 26 00 E9 23 00  2D F4 FF 75 03 E9 29 FD   F..&..#. -..u..).
1100:  2D 0E 00 75 03 E9 D1 FD  2D 08 00 75 03 E9 69 FC   -..u.... -..u..i.
1110:  2D 0C 00 75 03 E9 CF FE  E9 00 00 B8 1A 00 F7 6E   -..u.... .......n
1120:  0A 8B F0 C4 5E 06 26 83  78 0A FF 74 03 E9 09 00   ....^.&. x..t....
1130:  8B 46 0A E9 0F 00 E9 06  00 8B 46 FE E9 06 00 B8   .F...... ..F.....
1140:  FF FF E9 00 00 5E 5F 8B  E5 5D CB 55 8B EC 81 EC   .....^_. .].U....
1150:  04 00 57 56 C7 46 FE FF  FF B8 1A 00 F7 6E 1C 8B   ..WV.F.. .....n..
1160:  F0 C4 5E 12 8B 46 1A 26  39 40 0A 74 03 E9 7B 00   ..^..F.& 9@.t..{.
1170:  B8 1A 00 F7 6E 0E 8B F0  C4 5E 06 8B 46 10 26 39   ....n... .^..F.&9
1180:  40 04 74 03 E9 32 00 B8  1A 00 F7 6E 1A 8B F0 C4   @.t..2.. ...n....
1190:  5E 12 8B 46 1C 26 39 40  10 74 03 E9 18 00 B8 01   ^..F.&9@ .t......
11A0:  00 50 FF 76 1A FF 76 14  FF 76 12 9A EC 03 55 00   .P.v..v. .v....U.
11B0:  83 C4 08 89 46 FE E9 2F  00 B8 1A 00 F7 6E 1A 8B   ....F../ .....n..
11C0:  F0 C4 5E 12 8B 46 1C 26  39 40 04 74 03 E9 18 00   ..^..F.& 9@.t....
11D0:  B8 FF FF 50 FF 76 1A FF  76 14 FF 76 12 9A EC 03   ...P.v.. v..v....
11E0:  55 00 83 C4 08 89 46 FE  E9 4A 00 B8 1A 00 F7 6E   U.....F. .J.....n
11F0:  0E 8B F0 C4 5E 06 8B 46  10 26 39 40 10 74 03 E9   ....^..F .&9@.t..
1200:  1B 00 B8 01 00 50 FF 76  1A FF 76 14 FF 76 12 9A   .....P.v ..v..v..
1210:  EC 03 55 00 83 C4 08 89  46 FE E9 18 00 B8 FF FF   ..U..... F.......
1220:  50 FF 76 1A FF 76 14 FF  76 12 9A EC 03 55 00 83   P.v..v.. v....U..
1230:  C4 08 89 46 FE 83 7E FE  FF 75 03 E9 20 00 B8 1A   ...F..~. .u.. ...
1240:  00 F7 6E 1A 8B F0 C4 5E  12 26 8B 40 16 89 46 FC   ..n....^ .&.@..F.
1250:  8B 5E FC D1 E3 C4 76 16  8B 46 FE 26 89 00 8B 46   .^....v. .F.&...F
1260:  FE E9 00 00 5E 5F 8B E5  5D CB 55 8B EC 81 EC 00   ....^_.. ].U.....
1270:  00 57 56 83 3E D6 03 00  75 03 E9 0E 00 FF 76 06   .WV.>... u.....v.
1280:  9A 19 0D 55 00 83 C4 02  E9 0B 00 FF 76 06 9A 4C   ...U.... ....v..L
1290:  0B 55 00 83 C4 02 5E 5F  8B E5 5D CB 55 8B EC 81   .U....^_ ..].U...
12A0:  EC 14 00 57 56 83 7E 06  00 74 03 E9 20 00 C7 46   ...WV.~. .t.. ..F
12B0:  EC 20 D7 C7 46 EE C2 13  8E 06 48 0D 26 A1 2C 84   . ..F... ..H.&.,.
12C0:  89 46 FA C7 46 FC E0 85  8C 46 FE E9 1D 00 C7 46   .F..F... .F.....F
12D0:  EC 2E 55 C7 46 EE C2 13  8E 06 4A 0D 26 A1 3A 02   ..U.F... ..J.&.:.
12E0:  89 46 FA C7 46 FC EE 03  8C 46 FE B8 04 00 50 B8   .F..F... .F....P.
12F0:  00 00 50 FF 76 EE FF 76  EC 9A 58 2E AB 10 83 C4   ..P.v..v ..X.....
1300:  08 C7 46 F6 00 00 B8 00  00 89 46 F0 89 46 F8 E9   ..F..... ..F..F..
1310:  03 00 FF 46 F0 8B 46 FA  39 46 F8 7C 03 E9 43 01   ...F..F. 9F.|..C.
1320:  83 7E F8 FF 75 03 E9 37  01 C7 46 F2 00 00 B8 1A   .~..u..7 ..F.....
1330:  00 F7 6E F8 8B D8 C4 76  FC 26 8B 00 8B 5E F2 8B   ..n....v .&...^..
1340:  CB D1 E3 03 D9 D1 E3 C4  76 EC 26 39 00 7C 03 E9   ........ v.&9.|..
1350:  11 00 8B 46 F6 39 46 F2  7C 03 E9 06 00 FF 46 F2   ...F.9F. |.....F.
1360:  E9 CB FF B8 1A 00 F7 6E  F8 8B D8 C4 76 FC 26 8B   .......n ....v.&.
1370:  00 8B 5E F2 8B CB D1 E3  03 D9 D1 E3 C4 76 EC 26   ..^..... .....v.&
1380:  39 00 74 03 E9 37 00 B8  1A 00 F7 6E F8 8B F0 C4   9.t..7.. ...n....
1390:  5E FC 26 8B 40 02 8B 76  F2 8B CE D1 E6 03 F1 D1   ^.&.@..v ........
13A0:  E6 C4 5E EC 26 39 40 02  7C 03 E9 11 00 8B 46 F6   ..^.&9@. |.....F.
13B0:  39 46 F2 7C 03 E9 06 00  FF 46 F2 E9 A5 FF 8B 46   9F.|.... .F.....F
13C0:  F6 89 46 F4 E9 03 00 FF  4E F4 8B 46 F2 39 46 F4   ..F..... N..F.9F.
13D0:  7F 03 E9 30 00 8B 5E F4  8B C3 D1 E3 03 D8 D1 E3   ...0..^. ........
13E0:  C4 76 EC 8B 46 F4 8B C8  D1 E0 03 C1 D1 E0 03 46   .v..F... .......F
13F0:  EC 8B 56 EE 2D 06 00 1E  8D 38 8B F0 8E DA A5 A5   ..V.-... .8......
```

```
1400:  A5 1F E9 C2 FF FF 46 F6  B8 1A 00 F7 6E F8 8B D8   ......F. ....n...
1410:  C4 76 FC 26 8B 00 8B 5E  F2 8B CB D1 E3 03 D9 D1   .v.&...^ ........
1420:  E3 C4 76 EC 26 89 00 B8  1A 00 F7 6E F8 8B F0 C4   ..v.&... ...n....
1430:  5E FC 26 8B 40 02 8B 76  F2 8B CE D1 E6 03 F1 D1   ^.&.@..v ........
1440:  E6 C4 5E EC 26 89 40 02  8B 46 F8 8B 76 F2 8B CE   ..^.&.@. .F..v...
1450:  D1 E6 03 F1 D1 E6 C4 5E  EC 26 89 40 04 FF 46 F8   .......^ .&.@..F.
1460:  E9 AF FE 5E 5F 8B E5 5D  CB 55 8B EC 81 EC 1C 00   ...^_..] .U......
1470:  57 56 83 7E 06 00 74 03  E9 2C 00 C7 46 E8 20 D7   WV.~..t. .,..F. .
1480:  C7 46 EA C2 13 C7 46 FC  E0 85 C7 46 FE C2 13 C7   .F....F. ...F....
1490:  46 E4 50 84 C7 46 E6 C2  13 8E 06 48 0D 26 A1 2A   F.P..F.. ...H.&.*
14A0:  84 89 46 EE E9 29 00 C7  46 E8 2E 55 C7 46 EA C2   ..F..).. F..U.F..
14B0:  13 C7 46 FC EE 03 C7 46  FE C2 13 C7 46 E4 5E 02   ..F....F ....F.^.
14C0:  C7 46 E6 C2 13 8E 06 4A  0D 26 A1 38 02 89 46 EE   .F.....J .&.8..F.
14D0:  B8 04 00 50 B8 00 00 50  FF 76 EA FF 76 E8 9A 58   ...P...P .v..v..X
14E0:  2E AB 10 83 C4 08 C7 46  F8 00 00 C7 46 F2 00 00   .......F ....F...
14F0:  E9 03 00 FF 46 F2 8B 46  EE 39 46 F2 7C 03 E9 4C   ....F..F .9F.|..L
1500:  01 8B 5E F2 D1 E3 C4 76  E4 26 8B 00 89 46 FA 83   ..^....v .&...F..
1510:  7E FA 00 7D 03 E9 32 01  B8 1A 00 F7 6E FA 8B D8   ~..}..2. ....n...
1520:  C4 76 FC 26 8B 00 89 46  F0 3D 00 00 7D 03 E9 02   .v.&...F .=..}...
1530:  01 B8 1A 00 F7 6E FA 8B  F0 C4 5E FC 26 8B 40 02   .....n.. ..^.&.@.
1540:  89 46 EC C7 46 F4 00 00  E9 03 00 FF 46 F4 8B 46   .F..F... ....F..F
1550:  F8 39 46 F4 7C 03 E9 52  00 8B 5E F4 8B C3 D1 E3   .9F.|..R ..^.....
1560:  03 D8 D1 E3 C4 76 E8 8B  46 F0 26 39 00 7E 03 E9   .....v.. F.&9.~..
1570:  33 00 8B 5E F4 8B C3 D1  E3 03 D8 D1 E3 C4 76 E8   3..^.... ......v.
1580:  8B 46 F0 26 39 00 74 03  E9 1D 00 8B 76 F4 8B C6   .F.&9.t. ....v...
1590:  D1 E6 03 F0 D1 E6 C4 5E  E8 8B 46 EC 26 39 40 02   .......^ ..F.&9@.
15A0:  7F 03 E9 03 00 E9 03 00  E9 A0 FF 8B 46 F8 89 46   ........ ....F..F
15B0:  F6 E9 03 00 FF 4E F6 8B  46 F4 39 46 F6 7F 03 E9   .....N.. F.9F....
15C0:  30 00 8B 5E F6 8B C3 D1  E3 03 D8 D1 E3 C4 76 E8   0..^.... ......v.
15D0:  8B 46 F6 8B C8 D1 E0 03  C1 D1 E0 03 46 E8 8B 56   .F...... ....F..V
15E0:  EA 2D 06 00 1E 8D 38 8B  F0 8E DA A5 A5 A5 1F E9   .-....8. ........
15F0:  C2 FF 8B 5E F4 8B C3 D1  E3 03 D8 D1 E3 C4 76 E8   ...^.... ......v.
1600:  8B 46 F0 26 89 00 8B 46  EC 8B 76 F4 8B CE D1 E6   .F.&...F ..v.....
1610:  03 F1 D1 E6 C4 5E E8 26  89 40 02 8B 46 FA 8B 76   .....^.& .@..F..v
1620:  F4 8B CE D1 E6 03 F1 D1  E6 C4 5E E8 26 89 40 04   ........ ..^.&.@.
1630:  FF 46 F8 FF 76 FA FF 76  FE FF 76 FC 9A 06 00 55   .F..v..v ..v....U
1640:  00 83 C4 06 89 46 FA E9  C5 FE E9 A6 FE 5E 5F 8B   .....F.. .....^_.
1650:  E5 5D CB 00 55 8B EC 81  EC 14 00 57 56 83 7E 06   .]..U... ...WV.~.
1660:  00 75 03 E9 19 00 9A 23  04 45 01 3D 00 00 75 03   .u.....# .E.=..u.
1670:  E9 09 00 B8 00 00 BA 00  00 E9 F1 01 E9 3F 00 C7   ........ .....?..
1680:  46 EE 01 00 E9 03 00 FF  46 EE 83 7E EE 06 7C 03   F....... F..~..|.
1690:  E9 2B 00 FF 76 0E FF 76  0C FF 76 0A FF 76 08 FF   .+..v..v ..v..v..
16A0:  76 EE 9A 23 02 45 01 83  C4 0A 3D 00 00 75 03 E9   v..#.E.. ..=..u..
16B0:  09 00 B8 00 00 BA 00 00  E9 B2 01 E9 C9 FF FF 36   ........ .......6
16C0:  B0 0E FF 36 AE 0E 9A 2A  1D AB 10 83 C4 04 FF 36   ...6...* .......6
16D0:  B0 0E FF 36 AE 0E 8B F0  9A 2A 1D AB 10 83 C4 04   ...6.... .*......
16E0:  8B C8 80 C1 08 D3 E6 89  76 EC FF 36 B0 0E FF 36   ........ v..6...6
16F0:  AE 0E B8 04 00 50 B8 02  00 50 8D 46 F6 16 50 9A   .....P.. .P.F..P.
1700:  52 07 AB 10 83 C4 0C FF  36 B0 0E FF 36 AE 0E 9A   R....... 6...6...
1710:  2A 1D AB 10 83 C4 04 3D  0A 00 75 03 E9 03 00 E9   *......= ..u.....
1720:  E5 FF 83 7E 10 00 75 03  E9 5B 00 8E 06 4C 0D 26   ...~..u. .[...L.&
1730:  FF 36 E8 00 8E 06 4E 0D  26 FF 36 E6 00 9A 65 08   .6....N. &.6...e.
1740:  45 01 83 C4 04 8E 06 50  0D 26 A3 EE 77 26 89 16   E......P .&..w&..
1750:  F0 77 26 A1 F0 77 26 0B  06 EE 77 74 03 E9 26 00   .w&..w&. ..wt..&.
```

```
1760:  B8 D8 03 1E 50 9A 5C 0A  AB 10 83 C4 04 FF 36 B0   ....P.\. ......6.
1770:  0E FF 36 AE 0E 9A 3C 06  AB 10 83 C4 04 B8 00 00   ..6...<. ........
1780:  BA 00 00 E9 E7 00 2B C0  89 46 F4 89 46 F2 C7 46   ......+. .F..F..F
1790:  EE 00 00 E9 12 00 FF 46  EE 8E 06 4E 0D 26 A1 E6   .......F ...N.&..
17A0:  00 99 01 46 F2 11 56 F4  8E 06 4C 0D 8B 46 EE 26   ...F..V. ..L..F.&
17B0:  39 06 E8 00 7F 03 E9 78  00 FF 36 B0 0E FF 36 AE   9......x ..6...6.
17C0:  0E 8E 06 4E 0D 26 FF 36  E6 00 B8 01 00 50 8B 46   ...N.&.6 .....P.F
17D0:  F2 8B 56 F4 8E 06 50 0D  26 03 06 EE 77 83 D2 00   ..V...P. &...w...
17E0:  B9 0C 00 D3 E2 26 03 16  F0 77 52 50 9A 52 07 AB   .....&.. .wRP.R..
17F0:  10 83 C4 0C 89 46 F0 8E  06 4E 0D 8B 46 F0 26 39   .....F.. .N..F.&9
1800:  06 E6 00 7F 03 E9 26 00  FF 36 B0 0E FF 36 AE 0E   ......&. .6...6..
1810:  9A 3C 06 AB 10 83 C4 04  B8 ED 03 1E 50 9A 5C 0A   .<...... ....P.\.
1820:  AB 10 83 C4 04 B8 00 00  BA 00 00 E9 3F 00 E9 65   ........ ....?..e
1830:  FF FF 36 B0 0E FF 36 AE  0E 9A 3C 06 AB 10 83 C4   ..6...6. ..<.....
1840:  04 8E 06 4E 0D 26 A1 E6  00 C4 5E 12 26 89 07 8E   ...N.&.. ..^.&...
1850:  06 4C 0D 26 A1 E8 00 C4  5E 16 26 89 07 8E 06 50   .L.&.... ^.&....P
1860:  0D 26 A1 EE 77 26 8B 16  F0 77 E9 00 00 5E 5F 8B   .&..w&.. .w...^_.
1870:  E5 5D CB 55 8B EC 81 EC  06 00 57 56 C7 46 FA 00   .].U.... ..WV.F..
1880:  00 8B 46 06 E9 BF 01 83  7E 0C 00 7D 03 E9 0A 00   ..F..... ~..}....
1890:  81 7E 0C 00 04 7F 03 E9  15 00 FF 76 0C B8 47 04   .~...... ...v..G.
18A0:  1E 50 9A 5C 0A AB 10 83  C4 06 C7 46 FA 01 00 E9   .P.\.... ...F....
18B0:  B5 01 83 7E 0E 00 7D 03  E9 0A 00 81 7E 0E 00 04   ...~..}. ....~...
18C0:  7F 03 E9 15 00 FF 76 0E  B8 64 04 1E 50 9A 5C 0A   ......v. .d..P.\.
18D0:  AB 10 83 C4 06 C7 46 FA  01 00 E9 8A 01 B8 81 04   ......F. ........
18E0:  1E 50 FF 76 0A FF 76 08  9A 36 07 AB 10 83 C4 08   .P.v..v. .6......
18F0:  A3 AE 0E 89 16 B0 0E A1  B0 0E 0B 06 AE 0E 74 03   ........ ......t.
1900:  E9 18 00 FF 76 0A FF 76  08 B8 84 04 1E 50 9A 5C   ....v..v .....P.\
1910:  0A AB 10 83 C4 08 C7 46  FA 01 00 E9 49 01 FF 36   .......F ....I..6
1920:  B0 0E FF 36 AE 0E 9A 2A  1D AB 10 83 C4 04 FF 36   ...6...* .......6
1930:  B0 0E FF 36 AE 0E 9A 2A  1D AB 10 83 C4 04 FF 36   ...6...* .......6
1940:  B0 0E FF 36 AE 0E 9A 2A  1D AB 10 83 C4 04 89 46   ...6...* .......F
1950:  FE FF 36 B0 0E FF 36 AE  0E 9A 2A 1D AB 10 83 C4   ..6...6. ..*.....
1960:  04 8A E0 2A C0 01 46 FE  8E 06 4E 0D 26 83 3E E6   ...*..F. ..N.&.>.
1970:  00 00 74 03 E9 07 00 8B  46 FE 26 A3 E6 00 A1 38   ..t..... F.&....8
1980:  04 39 46 FE 7E 03 E9 11  00 8E 06 4E 0D 8B 46 FE   .9F.~... ...N..F.
1990:  26 39 06 E6 00 75 03 E9  2E 00 8E 06 4E 0D 26 FF   &9...u.. ....N.&.
19A0:  36 E6 00 FF 76 FE B8 97  04 1E 50 9A 5C 0A AB 10   6...v... ..P.\...
19B0:  83 C4 08 FF 36 B0 0E FF  36 AE 0E 9A 3C 06 AB 10   ....6... 6...<...
19C0:  83 C4 04 C7 46 FA 01 00  E9 9C 00 FF 36 B0 0E FF   ....F... ....6...
19D0:  36 AE 0E 9A 2A 1D AB 10  83 C4 04 89 46 FC FF 36   6...*... ....F..6
19E0:  B0 0E FF 36 AE 0E 9A 2A  1D AB 10 83 C4 04 8A E0   ...6...* ........
19F0:  2A C0 01 46 FC 8E 06 4C  0D 26 83 3E E8 00 00 74   *..F...L .&.>...t
1A00:  03 E9 07 00 8B 46 FC 26  A3 E8 00 A1 3A 04 39 46   .....F.& ....:.9F
1A10:  FC 7E 03 E9 11 00 8E 06  4C 0D 8B 46 FC 26 39 06   .~...... L..F.&9.
1A20:  E8 00 75 03 E9 19 00 8E  06 4C 0D 26 FF 36 E8 00   ..u..... .L.&.6..
1A30:  FF 76 FC B8 CA 04 1E 50  9A 5C 0A AB 10 83 C4 08   .v.....P .\......
1A40:  E9 24 00 E9 21 00 48 75  03 E9 3B FE 48 75 03 E9   .$..!.Hu ..;.Hu..
1A50:  60 FE 48 75 03 E9 85 FE  48 75 03 E9 C0 FE 48 75   `.Hu.... Hu....Hu
1A60:  03 E9 67 FF E9 00 00 8B  46 FA E9 00 00 5E 5F 8B   ..g..... F....^_.
1A70:  E5 5D CB 55 8B EC 81 EC  00 00 57 56 B8 00 00 E9   .].U.... ..WV....
1A80:  00 00 5E 5F 8B E5 5D CB  55 8B EC 81 EC 0A 02 57   ..^_..]. U......W
1A90:  56 B8 FA 04 1E 50 FF 76  08 FF 76 06 9A 36 07 AB   V....P.v ..v..6..
1AA0:  10 83 C4 08 89 46 F8 89  56 FA FF 76 FA FF 76 F8   .....F.. V..v..v.
1AB0:  B8 FD 04 1E 50 9A F8 27  AB 10 83 C4 08 FF 76 FA   ....P..' ......v.
```

```
1AC0:  FF 76 F8 FF 76 0E 9A FA  1C AB 10 83 C4 06 FF 76   .v..v... .......v
1AD0:  FA FF 76 F8 8A 46 0F 98  50 9A FA 1C AB 10 83 C4   ..v..F.. P.......
1AE0:  06 FF 76 FA FF 76 F8 FF  76 10 9A FA 1C AB 10 83   ..v..v.. v.......
1AF0:  C4 06 FF 76 FA FF 76 F8  8A 46 11 98 50 9A FA 1C   ...v..v. .F..P...
1B00:  AB 10 83 C4 06 C7 86 F6  FD 00 00 E9 04 00 FF 86   ........ ........
1B10:  F6 FD 83 BE F6 FD 0A 7C  03 E9 15 00 FF 76 FA FF   .......| .....v..
1B20:  76 F8 B8 00 00 50 9A FA  1C AB 10 83 C4 06 E9 DD   v....P.. ........
1B30:  FF FF 76 FA FF 76 F8 B8  20 00 50 9A FA 1C AB 10   ..v..v..  .P.....
1B40:  83 C4 06 FF 76 FA FF 76  F8 B8 0A 00 50 9A FA 1C   ....v..v ....P...
1B50:  AB 10 83 C4 06 8B 46 0A  8B 56 0C 89 46 FC 89 56   ......F. .V..F..V
1B60:  FE C7 86 F6 FD 00 00 E9  04 00 FF 86 F6 FD 8B 46   ........ .......F
1B70:  10 39 86 F6 FD 7C 03 E9  4A 00 FF 76 0E FF 76 FE   .9...|.. J..v..v.
1B80:  FF 76 FC 8D 86 F8 FD 16  50 9A FA 2D AB 10 83 C4   .v...... P..-....
1B90:  0A FF 76 FA FF 76 F8 FF  76 0E B8 01 00 50 8D 86   ..v..v.. v....P..
1BA0:  F8 FD 16 50 9A C4 08 AB  10 83 C4 0C 8B 46 0E 99   ...P.... .....F..
1BB0:  2B DB 8B C8 01 4E FC 13  DA B9 0C 00 D3 E3 01 5E   +....N.. .......^
1BC0:  FE E9 A6 FF FF 76 FA FF  76 F8 9A 3C 06 AB 10 83   .....v.. v..<....
1BD0:  C4 04 5E 5F 8B E5 5D CB  55 8B EC 81 EC 00 00 57   ..^_..]. U......W
1BE0:  56 A1 12 04 2B 06 14 04  8E 06 4E 0D 26 A3 E6 00   V...+... ..N.&...
1BF0:  A1 16 04 2B 06 18 04 8E  06 4C 0D 26 A3 E8 00 5E   ...+.... .L.&...^
1C00:  5F 8B E5 5D CB 55 8B EC  81 EC 00 00 57 56 8E 06   _..].U.. ....WV..
1C10:  4E 0D 26 A1 E6 00 C4 5E  06 26 89 07 8E 06 4C 0D   N.&....^ .&....L.
1C20:  26 A1 E8 00 C4 5E 0A 26  89 07 5E 5F 8B E5 5D CB   &....^.& ..^_..].
1C30:  55 8B EC 81 EC 76 00 57  56 8D 7E F4 BE 00 05 8C   U....v.W V.~.....
1C40:  D0 8E C0 B9 06 00 F3 A5  C6 46 8A 00 B8 0C 05 1E   ........ .F......
1C50:  50 8D 46 F4 16 50 9A 36  07 AB 10 83 C4 08 89 46   P.F..P.6 .......F
1C60:  F0 89 56 F2 0B D0 75 03  E9 0D 01 80 7E 8A 21 75   ..V...u. ....~.!u
1C70:  03 E9 1A 00 FF 76 F2 FF  76 F0 B8 64 00 50 8D 46   .....v.. v..d.P.F
1C80:  8A 16 50 9A 7E 27 AB 10  83 C4 0A E9 DD FF FF 76   ..P.~'.. .......v
1C90:  08 FF 76 06 B8 0F 05 1E  50 8D 46 8B 16 50 9A C6   ..v..... P.F..P..
1CA0:  28 AB 10 83 C4 0C C7 46  EE 00 00 C4 5E 06 8B 46   (......F ....^..F
1CB0:  EE 26 39 07 75 03 E9 72  00 C6 46 8A 00 80 7E 8A   .&9.u..r ..F...~.
1CC0:  21 75 03 E9 4B 00 FF 76  F2 FF 76 F0 B8 64 00 50   !u..K..v ..v..d.P
1CD0:  8D 46 8A 16 50 9A 7E 27  AB 10 83 C4 0A C4 5E F0   .F..P.~' ......^.
1CE0:  26 F6 47 0A 10 75 03 E9  24 00 8D 46 F4 16 50 C4   &.G..u.. $..F..P.
1CF0:  5E 06 26 FF 37 B8 13 05  1E 50 9A 5C 0A AB 10 83   ^.&.7... .P.\....
1D00:  C4 0A B8 F5 FF 50 9A DD  01 AB 10 83 C4 02 E9 AC   .....P.. ........
1D10:  FF 8D 46 EE 16 50 B8 32  05 1E 50 8D 46 8B 16 50   ..F..P.2 ..P.F..P
1D20:  9A C6 28 AB 10 83 C4 0C  E9 80 FF FF 76 20 FF 76   ..(..... ....v .v
1D30:  1E FF 76 1C FF 76 1A FF  76 18 FF 76 16 FF 76 14   ..v..v.. v..v..v.
1D40:  FF 76 12 FF 76 10 FF 76  0E FF 76 0C FF 76 0A FF   .v..v..v ..v..v..
1D50:  76 08 FF 76 06 B8 36 05  1E 50 8D 46 8B 16 50 9A   v..v..6. .P.F..P.
1D60:  C6 28 AB 10 83 C4 24 FF  76 F2 FF 76 F0 9A 3C 06   .(....$. v..v..<.
1D70:  AB 10 83 C4 04 E9 1E 00  8D 46 F4 16 50 B8 52 05   ........ .F..P.R.
1D80:  1E 50 9A 5C 0A AB 10 83  C4 08 B8 FF FF 50 9A DD   .P.\.... .....P..
1D90:  01 AB 10 83 C4 02 5E 5F  8B E5 5D CB 55 8B EC 81   ......^_ ..].U...
1DA0:  EC 02 00 57 56 8D 46 FE  16 50 B8 18 04 1E 50 B8   ...WV.F. .P....P.
1DB0:  16 04 1E 50 B8 14 04 1E  50 B8 12 04 1E 50 B8 EA   ...P.... P....P..
1DC0:  00 B9 1D 24 51 50 B8 28  84 B9 C2 13 51 50 9A E0   ...$QP.( ....QP..
1DD0:  05 45 01 83 C4 1C 9A 9B  07 45 01 9A 88 05 45 01   .E...... .E....E.
1DE0:  9A 27 02 00 00 5E 5F 8B  E5 5D CB 55 8B EC 81 EC   .'...^_. .].U....
1DF0:  00 00 57 56 8E 06 52 0D  26 A1 28 84 E9 42 00 B8   ..WV..R. &.(..B..
1E00:  61 05 1E 50 B8 1A 04 1E  50 9A 9C 25 AB 10 83 C4   a..P.... P..%....
1E10:  08 E9 44 00 B8 71 05 1E  50 B8 1A 04 1E 50 9A 9C   ..D..q.. P....P..
```

```
1E20:  25 AB 10 83 C4 08 E9 2F  00 B8 81 05 1E 50 B8 1A   %....../ .....P..
1E30:  04 1E 50 9A 9C 25 AB 10  83 C4 08 E9 1A 00 E9 17   ..P..%.. ........
1E40:  00 48 48 75 03 E9 B7 FF  48 48 75 03 E9 C5 FF 48   .HHu.... HHu....H
1E50:  75 03 E9 D4 FF E9 00 00  5E 5F 8B E5 5D CB 55 8B   u....... ^_..].U.
1E60:  EC 81 EC 00 00 57 56 B8  93 05 1E 50 B8 1A 04 1E   .....WV. ...P....
1E70:  50 9A 9C 25 AB 10 83 C4  08 5E 5F 8B E5 5D CB 55   P..%.... .^_..].U
1E80:  8B EC 81 EC 00 00 57 56  FF 76 08 FF 76 06 9A 65   ......WV .v..v..e
1E90:  08 45 01 83 C4 04 8E 06  50 0D 26 A3 EE 77 26 89   .E...... P.&..w&.
1EA0:  16 F0 77 26 A1 EE 77 26  8B 16 F0 77 E9 00 00 5E   ..w&..w& ...w...^
1EB0:  5F 8B E5 5D CB 55 8B EC  81 EC 00 00 57 56 B8 01   _..].U.. ....WV..
1EC0:  00 50 8B 46 08 F7 6E 06  52 50 9A 5E 29 AB 10 83   .P.F..n. RP.^)...
1ED0:  C4 06 E9 00 00 5E 5F 8B  E5 5D CB 55 8B EC 81 EC   .....^_. .].U....
1EE0:  00 00 57 56 8E 06 50 0D  26 FF 36 F0 77 26 FF 36   ..WV..P. &.6.w&.6
1EF0:  EE 77 9A 52 29 AB 10 83  C4 04 5E 5F 8B E5 5D CB   .w.R)... ..^_..].
1F00:  55 8B EC 81 EC 06 00 57  56 8E 06 54 0D 26 C7 06   U......W V..T.&..
1F10:  2E 84 00 00 26 C7 06 30  84 00 00 8E 06 56 0D 26   ....&..0 .....V.&
1F20:  A1 E6 00 B9 18 00 99 F7  F9 8E 06 58 0D 26 A3 22   ........ ...X.&."
1F30:  84 8E 06 5A 0D 26 A1 E8  00 99 F7 F9 8E 06 5C 0D   ...Z.&.. ......\.
1F40:  26 A3 24 84 C7 46 FA 00  00 E9 03 00 FF 46 FA 81   &.$..F.. .....F..
1F50:  7E FA 00 04 72 03 E9 10  00 8E 06 5E 0D 8B 5E FA   ~...r... ...^..^.
1F60:  26 C6 87 6A 07 00 E9 E3  FF 8E 06 56 0D 26 A1 E6   &..j.... ...V.&..
1F70:  00 99 33 C2 2B C2 B9 04  00 D3 F8 33 C2 2B C2 8E   ..3.+... ...3.+..
1F80:  06 60 0D 26 A3 22 02 8E  06 5A 0D 26 A1 E8 00 99   .`.&.".. .Z.&....
1F90:  33 C2 2B C2 B9 04 00 D3  F8 33 C2 2B C2 8E 06 62   3.+..... .3.+...b
1FA0:  0D 26 A3 36 02 C7 46 FA  00 00 E9 03 00 FF 46 FA   .&.6..F. ......F.
1FB0:  81 7E FA 00 10 72 03 E9  10 00 8E 06 64 0D 8B 5E   .~...r.. ....d..^
1FC0:  FA 26 C6 87 EE 67 00 E9  E3 FF C7 46 FE 16 00 FF   .&...g.. ...F....
1FD0:  76 FE 9A A4 02 24 00 83  C4 02 89 46 FC 2B C0 A3   v....$.. ...F.+..
1FE0:  B4 0E A3 B2 0E 8B 46 FC  99 A3 B6 0E 89 16 B8 0E   ......F. ........
1FF0:  C7 06 BA 0E E8 03 C7 06  BC 0E 00 00 8B 46 FE 8B   ........ .....F..
2000:  C8 D1 E0 03 C1 50 9A A4  02 24 00 83 C4 02 99 A3   .....P.. .$......
2010:  BE 0E 89 16 C0 0E C7 06  C2 0E 7F 96 C7 06 C4 0E   ........ ........
2020:  98 00 C7 06 BA 22 7F 96  C7 06 BC 22 98 00 A1 BE   .....".. ..."....
2030:  0E 8B 16 C0 0E A3 BE 22  89 16 C0 22 C7 06 C2 22   ......." ..."..."
2040:  E8 03 C7 06 C4 22 00 00  A1 B6 0E 8B 16 B8 0E A3   .....".. ........
2050:  C6 22 89 16 C8 22 2B C0  A3 CC 22 A3 CA 22 C7 46   ."..."+. .."..".F
2060:  FA 05 00 E9 03 00 FF 46  FA 83 7E FA 08 7C 03 E9   .......F ..~..|..
2070:  51 00 BB D2 0E 8B 46 FA  D1 E0 D1 E0 2B D8 8B 07   Q.....F. ....+...
2080:  8B 57 02 F7 D8 83 D2 00  F7 DA 8B 5E FA D1 E3 D1   .W...... ...^....
2090:  E3 89 87 B2 0E 89 97 B4  0E BB DA 22 8B 46 FA D1   ........ ...".F..
20A0:  E0 D1 E0 2B D8 8B 07 8B  57 02 F7 D8 83 D2 00 F7   ...+.... W.......
20B0:  DA 8B 5E FA D1 E3 D1 E3  89 87 BA 22 89 97 BC 22   ..^..... ..."..."
20C0:  E9 A3 FF 5E 5F 8B E5 5D  CB 55 8B EC 81 EC 04 00   ...^_..] .U......
20D0:  57 56 B8 16 00 50 9A A4  02 24 00 83 C4 02 89 46   WV...P.. .$.....F
20E0:  FE C7 46 FC 00 00 E9 03  00 FF 46 FC 83 7E FC 2F   ..F..... ..F..~./
20F0:  7C 03 E9 09 02 8B 46 FC  8E 06 66 0D B1 03 8B 5E   |.....F. ..f....^
2100:  FC D3 E3 26 89 87 22 78  8B 5E FC D3 E3 26 C7 87   ...&.."x .^...&..
2110:  24 78 00 00 B8 FF FF 2B  46 FC 8B 5E FC D3 E3 26   $x.....+ F..^...&
2120:  89 87 26 78 8B 5E FC D3  E3 26 C7 87 28 78 00 00   ..&x.^.. .&..(x..
2130:  8B 46 FC 8B 5E FC D3 E3  26 89 87 A2 79 8B 46 FE   .F..^... &...y.F.
2140:  F7 6E FC 2D 0C FE F7 D8  BB E8 03 99 F7 FB 8B 76   .n.-.... .......v
2150:  FC D3 E6 26 89 84 A4 79  B8 FF FF 2B 46 FC 8B 76   ...&...y ...+F..v
2160:  FC D3 E6 26 89 84 A6 79  8B 46 FC 40 F7 6E FE 05   ...&...y .F.@.n..
2170:  F4 01 99 F7 FB 8B 5E FC  D3 E3 26 89 87 A8 79 8B   ......^. ..&...y.
```

```
2180:  46 FC 8B 5E FC D3 E3 26  89 87 22 7B 8B 46 FC F7   F..^...& .."{.F..
2190:  D8 8B 5E FC D3 E3 26 89  87 24 7B B8 FF FF 2B 46   ..^...&. .${...+F
21A0:  FC 8B 5E FC D3 E3 26 89  87 26 7B 8B 46 FC 40 8B   ..^...&. .&{.F.@.
21B0:  5E FC D3 E3 26 89 87 28  7B 8B 5E FC D3 E3 26 8B   ^...&..( {.^...&.
21C0:  87 A4 79 F7 D8 8B 5E FC  D3 E3 26 89 87 A2 7C 8B   ..y...^. ..&...|.
21D0:  46 FC F7 D8 8B 5E FC D3  E3 26 89 87 A4 7C 8B 5E   F....^.. .&...|.^
21E0:  FC D3 E3 26 8B 87 A8 79  F7 D8 8B 5E FC D3 E3 26   ...&...y ...^...&
21F0:  89 87 A6 7C 8B 46 FC 40  8B 5E FC D3 E3 26 89 87   ...|.F.@ .^...&..
2200:  A8 7C 8B 5E FC D3 E3 26  C7 87 22 7E 00 00 8B 46   .|.^...& .."~...F
2210:  FC F7 D8 8B 5E FC D3 E3  26 89 87 24 7E 8B 5E FC   ....^... &..$~.^.
2220:  D3 E3 26 C7 87 26 7E 00  00 8B 46 FC 40 8B 5E FC   ..&..&~. ..F.@.^.
2230:  D3 E3 26 89 87 28 7E 8B  5E FC D3 E3 26 8B 87 A4   ..&..(~. ^...&...
2240:  79 8B 5E FC D3 E3 26 89  87 A2 7F 8B 46 FC F7 D8   y.^...&. ....F...
2250:  8B 5E FC D3 E3 26 89 87  A4 7F 8B 5E FC D3 E3 26   .^...&.. ...^...&
2260:  8B 87 A8 79 8B 5E FC D3  E3 26 89 87 A6 7F 8B 46   ...y.^.. .&.....F
2270:  FC 40 8B 5E FC D3 E3 26  89 87 A8 7F 8B 46 FC F7   .@.^...& .....F..
2280:  D8 8B 5E FC D3 E3 26 89  87 22 81 8B 46 FC F7 D8   ..^...&. ."..F...
2290:  8B 5E FC D3 E3 26 89 87  24 81 8B 46 FC 40 8B 5E   .^...&.. $..F.@.^
22A0:  FC D3 E3 26 89 87 26 81  8B 46 FC 40 8B 5E FC D3   ...&..&. .F.@.^..
22B0:  E3 26 89 87 28 81 8B 46  FC F7 D8 8B 5E FC D3 E3   .&..(..F ....^...
22C0:  26 89 87 A2 82 8B 5E FC  D3 E3 26 8B 87 A4 79 8B   &.....^. ..&...y.
22D0:  5E FC D3 E3 26 89 87 A4  82 8B 46 FC 40 8B 5E FC   ^...&... ..F.@.^.
22E0:  D3 E3 26 89 87 A6 82 8B  5E FC D3 E3 26 8B 87 A8   ..&..... ^...&...
22F0:  79 8B 5E FC D3 E3 26 89  87 A8 82 E9 EB FD 5E 5F   y.^...&. ......^_
2300:  8B E5 5D CB 55 8B EC 81  EC 04 00 57 56 8E 06 5C   ..].U... ...WV..\
2310:  0D 26 A1 24 84 8E 06 58  0D 26 F7 2E 22 84 8B C8   .&.$...X .&.."...
2320:  8E 06 54 0D 26 A1 30 84  D1 E0 D1 E0 99 F7 F9 88   ..T.&.0. ........
2330:  46 FC C7 46 FE 00 00 E9  03 00 FF 46 FE 8E 06 5C   F..F.... ...F...\
2340:  0D 26 A1 24 84 8E 06 58  0D 26 F7 2E 22 84 3B 46   .&.$...X .&..".;F
2350:  FE 7F 03 E9 30 00 8E 06  5E 0D 8B 5E FE 8A 46 FC   ....0... ^..^..F.
2360:  26 38 87 6A 07 77 03 E9  0C 00 8B 5E FE 26 C6 87   &8.j.w.. ...^.&..
2370:  6A 07 00 E9 0D 00 8E 06  5E 0D 8B 5E FE 26 C6 87   j....... ^..^.&..
2380:  6A 07 01 E9 B4 FF 5E 5F  8B E5 5D CB 55 8B EC 81   j.....^_ ..].U...
2390:  EC 00 00 57 56 B8 64 00  8E 06 54 0D 26 F7 2E 30   ...WV.d. ..T.&..0
23A0:  84 26 8B 0E 2E 84 83 F9  01 7C 03 E9 03 00 B9 01   .&...... .|......
23B0:  00 99 F7 F9 3D 14 00 7F  03 E9 09 00 B8 01 00 E9   ....=... ........
23C0:  09 00 E9 06 00 B8 00 00  E9 00 00 5E 5F 8B E5 5D   ........ ...^_..]
23D0:  CB 55 8B EC 81 EC 06 00  57 56 C4 5E 06 26 8B 47   .U...... WV.^.&.G
23E0:  0A 89 46 FC C4 5E 06 26  8B 47 0C 89 46 FA 8B 46   ..F..^.& .G..F..F
23F0:  FC 99 33 C2 2B C2 B9 04  00 D3 F8 33 C2 2B C2 8B   ..3.+... ...3.+..
2400:  C8 8B 46 FA 8B D9 99 33  C2 2B C2 B9 04 00 D3 F8   ..F....3 .+......
2410:  33 C2 2B C2 8B C8 8E 06  60 0D 26 A1 22 02 F7 E9   3.+..... `.&."...
2420:  03 D8 89 5E FE 8A 4E 0A  B0 01 D2 E0 8E 06 64 0D   ...^..N. ......d.
2430:  8B 5E FE 26 08 87 EE 67  5E 5F 8B E5 5D CB 55 8B   .^.&...g ^_..].U.
2440:  EC 81 EC 10 00 57 56 C6  46 FE 00 83 7E 0A 00 7D   .....WV. F...~..}
2450:  03 E9 8E 00 8B 46 0A 05  07 00 B9 08 00 99 F7 F9   .....F.. ........
2460:  8B CA B0 01 D2 E0 08 46  FE 8B 46 0A 05 08 00 B9   .......F ..F.....
2470:  08 00 99 F7 F9 8B CA B0  01 D2 E0 08 46 FE 8B 46   ........ ....F..F
2480:  0A 05 09 00 B9 08 00 99  F7 F9 8B CA B0 01 D2 E0   ........ ........
2490:  08 46 FE 83 3E DE 22 00  7F 03 E9 15 00 8B 46 0A   .F..>.". ......F.
24A0:  05 0A 00 B9 08 00 99 F7  F9 8B CA B0 01 D2 E0 08   ........ ........
24B0:  46 FE 83 3E DE 22 00 7C  03 E9 15 00 8B 46 0A 05   F..>.".| .....F..
24C0:  06 00 B9 08 00 99 F7 F9  8B CA B0 01 D2 E0 08 46   ........ .......F
24D0:  FE 8E 06 68 0D 26 C7 06  00 00 01 00 8A 46 FE E9   ...h.&.. .....F..
```

```
24E0:  F9 01 8B 46 06 99 33 C2  2B C2 B9 04 00 D3 F8 33   ...F..3. +......3
24F0:  C2 2B C2 89 46 F6 8B 46  08 99 33 C2 2B C2 B9 04   .+..F..F ..3.+...
2500:  00 D3 F8 33 C2 2B C2 89  46 F2 8E 06 60 0D 26 A1   ...3.+.. F...`.&.
2510:  22 02 F7 6E F2 03 46 F6  89 46 FC 8E 06 64 0D 8B   "..n..F. .F...d..
2520:  5E FC 26 8A 87 EE 67 88  46 FE 80 7E FE 00 75 03   ^.&...g. F..~..u.
2530:  E9 3E 00 80 7E FE 80 73  03 E9 05 00 B0 01 E9 02   .>..~..s ........
2540:  00 B0 00 8A 4E FE D0 E1  0A C1 08 46 FE 8A 46 FE   ....N... ...F..F.
2550:  24 01 3C 01 F5 1A C0 24  80 8A 4E FE D0 E9 0A C1   $.<....$ ..N.....
2560:  08 46 FE 8E 06 68 0D 26  C7 06 00 00 02 00 E9 4C   .F...h.& .......L
2570:  01 8E 06 68 0D 26 C7 06  00 00 02 00 B1 04 8B 46   ...h.&.. .......F
2580:  F6 D3 E0 05 07 00 89 46  FA 8B 46 06 2B 46 FA 50   .......F ..F.+F.P
2590:  9A 04 2F AB 10 83 C4 02  3D 04 00 7D 03 E9 5E 00   ../..... =..}..^.
25A0:  8B 46 06 2B 46 FA 3D 00  00 7F 03 E9 06 00 B8 01   .F.+F.=. ........
25B0:  00 E9 03 00 B8 FF FF 03  46 F6 89 46 F4 83 7E F4   ........ F..F..~.
25C0:  00 7D 03 E9 38 00 8E 06  60 0D 8B 46 F4 26 39 06   .}..8... `..F.&9.
25D0:  22 02 7F 03 E9 27 00 26  A1 22 02 F7 6E F2 03 46   "....'.& ."..n..F
25E0:  F4 89 46 FC 8E 06 64 0D  8B 5E FC 26 8A 87 EE 67   ..F...d. .^.&...g
25F0:  08 46 FE 8E 06 68 0D 26  C7 06 00 00 03 00 B1 04   .F...h.& ........
2600:  8B 46 F2 D3 E0 05 07 00  89 46 F8 8B 46 08 2B 46   .F...... .F..F.+F
2610:  F8 50 9A 04 2F AB 10 83  C4 02 3D 04 00 7D 03 E9   .P../... ..=..}..
2620:  62 00 8B 46 08 2B 46 F8  3D 00 00 7F 03 E9 06 00   b..F.+F. =.......
2630:  B8 01 00 E9 03 00 B8 FF  FF 03 46 F2 89 46 F0 83   ........ ..F..F..
2640:  7E F0 00 7D 03 E9 3C 00  8E 06 62 0D 8B 46 F0 26   ~..}..<. ..b..F.&
2650:  39 06 36 02 7F 03 E9 2B  00 8E 06 60 0D 26 A1 22   9.6....+ ...`.&."
2660:  02 F7 6E F0 03 46 F6 89  46 FC 8E 06 64 0D 8B 5E   ..n..F.. F...d..^
2670:  FC 26 8A 87 EE 67 08 46  FE 8E 06 68 0D 26 C7 06   .&...g.F ...h.&..
2680:  00 00 04 00 80 7E FE 00  75 03 E9 30 00 80 7E FE   .....~.. u..0..~.
2690:  80 73 03 E9 05 00 B0 01  E9 02 00 B0 00 8A 4E FE   .s...... ......N.
26A0:  D0 E1 0A C1 08 46 FE 8A  46 FE 24 01 3C 01 F5 1A   .....F.. F.$.<...
26B0:  C0 24 80 8A 4E FE D0 E9  0A C1 08 46 FE 80 7E FE   .$..N... ...F..~.
26C0:  00 74 03 E9 0F 00 C6 46  FE FF 8E 06 68 0D 26 C7   .t.....F ....h.&.
26D0:  06 00 00 00 00 8A 46 FE  E9 00 00 5E 5F 8B E5 5D   ......F. ...^_..]
26E0:  CB 55 8B EC 81 EC 26 00  57 56 B8 32 00 8B 5E 06   .U....&. WV.2..^.
26F0:  D1 E3 99 F7 BF 9E 05 D1  E0 48 89 46 EE B8 60 00   ........ .H.F..`.
2700:  F7 6E 06 8B D8 03 5E EE  D1 E3 D1 E3 8E 06 66 0D   .n....^. ......f.
2710:  26 8B 87 22 78 89 46 E4  B8 60 00 F7 6E 06 8B D8   &.."x.F. .`..n...
2720:  03 5E EE D1 E3 D1 E3 26  8B 87 24 78 89 46 E0 FF   .^.....& ..$x.F..
2730:  76 E0 9A 04 2F AB 10 83  C4 02 2B 06 B4 22 F7 D8   v.../... ..+.."..
2740:  89 46 DE FF 76 E4 9A 04  2F AB 10 83 C4 02 2B 06   .F..v... /.....+.
2750:  B2 22 F7 D8 89 46 E2 C4  5E 08 26 C7 07 00 00 C4   ."...F.. ^.&.....
2760:  5E 0C 26 C7 07 00 00 C7  46 F4 4E 06 8C 5E F6 A1   ^.&..... F.N..^..
2770:  B2 22 F7 6E E0 03 46 E4  89 46 FA C7 46 FC AE 05   .".n..F. .F..F...
2780:  8C 5E FE 8B 46 FC 39 46  F4 77 03 E9 B7 00 C4 5E   .^..F.9F .w.....^
2790:  FC 83 46 FC 02 26 8B 07  89 46 F0 C4 5E FC 83 46   ..F..&.. .F..^..F
27A0:  FC 02 26 8B 07 89 46 EA  8B 46 F0 39 46 E2 77 03   ..&...F. .F.9F.w.
27B0:  E9 0B 00 8B 46 EA 39 46  DE 76 03 E9 03 00 E9 C2   ....F.9F .v......
27C0:  FF 83 7E E4 00 7C 03 E9  06 00 8B 46 E4 29 46 F0   ..~..|.. ...F.)F.
27D0:  83 7E E0 00 7C 03 E9 06  00 8B 46 E0 29 46 EA A1   .~..|... ..F.)F..
27E0:  B2 22 F7 66 EA 03 06 D4  0E 8B 16 D6 0E 03 46 F0   .".f.... ......F.
27F0:  89 46 DA 89 56 DC C4 5E  DA 26 8A 07 2A E4 89 46   .F..V..^ .&..*..F
2800:  F8 C4 5E DA 8B 76 FA 26  8A 00 2A E4 89 46 F2 8B   ..^..v.& ..*..F..
2810:  46 F2 2B 46 F8 50 9A 04  2F AB 10 83 C4 02 89 46   F.+F.P.. /......F
2820:  E8 8B 46 F8 39 06 D2 0E  77 03 E9 0C 00 8B 46 E8   ..F.9... w.....F.
2830:  C4 5E 0C 26 01 07 E9 09  00 8B 46 E8 C4 5E 08 26   .^.&.... ..F..^.&
```

```
2840:  01 07 E9 3E FF E9 00 00  5E 5F 8B E5 5D CB 55 8B   ...>.... ^_..].U.
2850:  EC 81 EC 1A 00 57 56 C7  46 E8 00 00 E9 03 00 FF   .....WV. F.......
2860:  46 E8 83 7E E8 08 72 03  E9 33 00 8E 06 6A 0D 8B   F..~..r. .3...j..
2870:  5E E8 D1 E3 26 C7 87 E0  E9 00 00 8E 06 6C 0D 8B   ^...&... .....l..
2880:  5E E8 D1 E3 26 C7 87 56  07 00 00 8E 06 6E 0D 8B   ^...&..V .....n..
2890:  5E E8 D1 E3 26 C7 87 46  07 00 00 E9 C1 FF C7 46   ^...&..F .......F
28A0:  FA 00 7D C7 46 EC 00 7D  C7 46 EA 00 7D C7 46 E8   ..}.F..} .F..}.F.
28B0:  00 00 C6 46 FE 01 E9 06  00 FF 46 E8 D0 66 FE 83   ...F.... ..F..f..
28C0:  7E E8 08 72 03 E9 C7 00  8A 46 FE 84 46 06 75 03   ~..r.... .F..F.u.
28D0:  E9 A9 00 8D 46 F2 16 50  8D 4E F6 16 51 FF 76 E8   ....F..P .N..Q.v.
28E0:  9A E1 07 D0 01 83 C4 0A  8B 46 F2 03 46 F6 89 46   ........ .F..F..F
28F0:  F4 8B 46 F4 B9 05 00 2B  D2 F7 F1 8E 06 6A 0D 8B   ..F....+ .....j..
2900:  5E E8 D1 E3 26 89 87 E0  E9 8B 46 F6 B9 05 00 99   ^...&... ..F.....
2910:  F7 F9 8E 06 6C 0D 8B 5E  E8 D1 E3 26 89 87 56 07   ....l..^ ...&..V.
2920:  8B 46 F2 99 F7 F9 8E 06  6E 0D 8B 5E E8 D1 E3 26   .F...... n..^...&
2930:  89 87 46 07 8B 46 F4 39  46 FA 77 03 E9 0C 00 8B   ..F..F.9 F.w.....
2940:  46 F4 89 46 FA 8B 46 E8  89 46 EE 8B 46 EC 39 46   F..F..F. .F..F.9F
2950:  F6 7C 03 E9 0C 00 8B 46  F6 89 46 EC 8B 46 E8 89   .|.....F ..F..F..
2960:  46 FC 8B 46 EA 39 46 F2  7C 03 E9 0C 00 8B 46 F2   F..F.9F. |.....F.
2970:  89 46 EA 8B 46 E8 89 46  F8 E9 10 00 8E 06 6A 0D   .F..F..F ......j.
2980:  8B 5E E8 D1 E3 26 C7 87  E0 E9 00 00 E9 2A FF 8B   .^...&.. .....*..
2990:  46 FC 39 46 EE 74 03 E9  09 00 8B 46 EE E9 D9 00   F.9F.t.. ...F....
29A0:  E9 D6 00 8B 46 F8 39 46  EE 74 03 E9 5D 00 83 3E   ....F.9F .t..]..>
29B0:  9A 05 00 74 03 E9 53 00  8B 46 FC 2B 46 F8 50 9A   ...t..S. .F.+F.P.
29C0:  04 2F AB 10 83 C4 02 89  46 F0 B8 08 00 2B 46 F0   ./...... F....+F.
29D0:  3B 46 F0 76 03 E9 0C 00  B8 08 00 2B 46 F0 89 46   ;F.v.... ...+F..F
29E0:  E6 E9 15 00 8B 46 FC 2B  46 F8 50 9A 04 2F AB 10   .....F.+ F.P../..
29F0:  83 C4 02 89 46 F0 89 46  E6 83 7E E6 02 76 03 E9   ....F..F ..~..v..
2A00:  09 00 8B 46 EE E9 71 00  E9 6E 00 8B 46 F8 39 46   ...F..q. .n..F.9F
2A10:  EE 74 03 E9 5D 00 83 3E  9A 05 01 74 03 E9 53 00   .t..]..> ...t..S.
2A20:  8B 46 FC 2B 46 F8 50 9A  04 2F AB 10 83 C4 02 89   .F.+F.P. ./......
2A30:  46 F0 B8 08 00 2B 46 F0  3B 46 F0 76 03 E9 0C 00   F....+F. ;F.v....
2A40:  B8 08 00 2B 46 F0 89 46  E6 E9 15 00 8B 46 FC 2B   ...+F..F .....F.+
2A50:  46 F8 50 9A 04 2F AB 10  83 C4 02 89 46 F0 89 46   F.P../.. ....F..F
2A60:  E6 83 7E E6 02 72 03 E9  09 00 8B 46 EE E9 09 00   ..~..r.. ...F....
2A70:  E9 06 00 B8 FF FF E9 00  00 5E 5F 8B E5 5D CB 55   ........ .^_..].U
2A80:  8B EC 81 EC 82 00 57 56  C4 5E 14 26 83 3F 01 1B   ......WV .^.&.?..
2A90:  C0 F7 D8 89 46 B8 C7 46  82 03 00 8B 46 0A B9 02   ....F..F ....F...
2AA0:  00 99 F7 F9 89 56 D6 8B  46 0A E9 51 01 B8 01 00   .....V.. F..Q....
2AB0:  89 46 C2 89 46 9E E9 65  01 B8 01 00 8E 06 56 0D   .F..F..e ......V.
2AC0:  26 2B 06 E6 00 89 46 9E  B8 01 00 2B 06 B2 22 89   &+....F. ...+..".
2AD0:  46 C2 E9 49 01 8E 06 56  0D 26 A1 E6 00 F7 D8 89   F..I...V .&......
2AE0:  46 9E A1 B2 22 F7 D8 89  46 C2 E9 31 01 B8 FF FF   F..."... F..1....
2AF0:  8E 06 56 0D 26 2B 06 E6  00 89 46 9E B8 FF FF 2B   ..V.&+.. ..F....+
2B00:  06 B2 22 89 46 C2 E9 15  01 B8 01 00 8E 06 56 0D   ..".F... ......V.
2B10:  26 2B 06 E6 00 89 46 8E  89 46 88 B8 01 00 2B 06   &+....F. .F....+.
2B20:  B2 22 89 46 A6 89 46 A0  B8 01 00 89 46 90 89 46   .".F..F. ....F..F
2B30:  8C 89 46 8A B8 01 00 89  46 A8 89 46 A4 89 46 A2   ..F..... F..F..F.
2B40:  E9 DB 00 B8 01 00 8E 06  56 0D 26 2B 06 E6 00 89   ........ V.&+....
2B50:  46 8E 89 46 88 B8 01 00  2B 06 B2 22 89 46 A6 89   F..F.... +..".F..
2B60:  46 A0 26 A1 E6 00 F7 D8  89 46 90 89 46 8C 89 46   F.&..... .F..F..F
2B70:  8A A1 B2 22 F7 D8 89 46  A8 89 46 A4 89 46 A2 E9   ..."...F .F..F..
2B80:  9C 00 B8 FF FF 8E 06 56  0D 26 2B 06 E6 00 89 46   .......V .&+....F
2B90:  8E 89 46 88 B8 FF FF 2B  06 B2 22 89 46 A6 89 46   ..F....+ ..".F..F
```

```
EXTRACT.DMP          Thursday, January  6, 1994  12:02pm              Page 14

2BA0:  A0 26 A1 E6 00 F7 D8 89  46 90 89 46 8C 89 46 8A   .&...... F..F..F.
2BB0:  A1 B2 22 F7 D8 89 46 A8  89 46 A4 89 46 A2 E9 5D   .."...F. .F..F..]
2BC0:  00 B8 FF FF 8E 06 56 0D  26 2B 06 E6 00 89 46 8E   ......V. &+....F.
2BD0:  89 46 88 B8 FF FF 2B 06  B2 22 89 46 A6 89 46 A0   .F....+. .".F..F.
2BE0:  B8 FF FF 89 46 90 89 46  8C 89 46 8A B8 FF FF 89   ....F..F ..F.....
2BF0:  46 A8 89 46 A4 89 46 A2  E9 23 00 E9 20 00 3D 07   F..F..F. .#.. .=.
2C00:  00 76 03 E9 18 00 D1 E0  93 2E FF A7 0E 0D AD 0B   .v...... ........
2C10:  09 0C B9 0B 43 0C D5 0B  82 0C ED 0B C1 0C 8B 46   ....C... .......F
2C20:  D6 E9 78 00 8B 46 82 40  F7 6E C2 89 46 F2 8B 46   ..x..F.@ .n..F..F
2C30:  82 F7 6E C2 89 46 AC E9  72 00 B8 00 00 89 46 B4   ..n..F.. r.....F.
2C40:  89 46 F2 89 46 AC E9 0C  00 B9 05 00 8B 46 B4 99   .F..F... .....F..
2C50:  F7 F9 89 56 B4 8B 46 B4  39 46 82 7F 03 E9 20 00   ...V..F. 9F.... .
2C60:  8B 76 B4 D1 E6 8B 42 A0  01 46 AC FF 46 B4 8D 5E   .v....B. .F..F..^
2C70:  AA 8B 46 B4 D1 E0 2B D8  8B 07 01 46 F2 E9 C9 FF   ..F...+. ...F....
2C80:  B8 04 00 2B 46 82 B9 05  00 99 F7 F9 8B F2 D1 E6   ...+F... ........
2C90:  8B 42 A0 01 46 F2 E9 13  00 E9 10 00 0B C0 75 03   .B..F... ......u.
2CA0:  E9 81 FF 48 75 03 E9 91  FF E9 00 00 C4 5E 06 26   ...Hu... .....^.&
2CB0:  8B 47 02 89 46 F8 C4 5E  06 26 8B 47 04 89 46 EE   .G..F..^ .&.G..F.
2CC0:  C4 5E 06 26 8B 47 06 89  46 F0 C4 5E 06 26 8B 47   .^.&.G.. F..^.&.G
2CD0:  08 89 46 E8 8B 46 EE 2B  46 F8 40 89 46 E0 8B 46   ..F..F.+ F.@.F..F
2CE0:  E8 2B 46 F0 40 89 46 D8  C7 46 B2 00 00 B8 68 06   .+F.@.F. .F....h.
2CF0:  1E 50 8D 4E C8 16 51 8D  4E EC 16 51 8B 46 E8 03   .P.N..Q. N..Q.F..
2D00:  46 F0 99 2B C2 D1 F8 50  8B 46 EE 03 46 F8 99 2B   F..+...P .F..F..+
2D10:  C2 D1 F8 50 9A DE 1A C9  04 83 C4 10 8B 46 0E 0B   ...P.... .....F..
2D20:  46 0C 75 03 E9 48 00 C7  46 BA 01 00 8B 5E 0A D1   F.u..H.. F....^..
2D30:  E3 D1 E3 8B 87 B2 0E 8B  97 B4 0E 89 46 E4 89 56   ........ ....F..V
2D40:  E6 8B 5E 0A D1 E3 D1 E3  8B 87 BA 22 8B 97 BC 22   ..^..... ..."..."
2D50:  89 46 CC 89 56 CE A1 D2  0E 2B 06 68 06 89 46 94   .F..V... .+.h..F.
2D60:  A1 68 06 D1 E0 03 06 D2  0E 89 46 FA E9 23 00 C7   .h...... ..F..#..
2D70:  46 BA 00 00 83 7E B2 00  74 03 E9 15 00 A1 D2 0E   F....~.. t.......
2D80:  2B 06 68 06 40 8B C8 D1  E0 03 C1 D1 E0 03 C1 89   +.h.@... ........
2D90:  46 92 C7 46 D4 01 00 C7  46 DE 00 00 E9 03 00 FF   F..F.... F.......
2DA0:  46 DE 83 7E DE 03 7C 03  E9 4E 0B 8B 46 DE B1 03   F..~..|. .N..F...
2DB0:  D3 E0 99 2B C2 D1 F8 2B  46 0A F7 D8 50 9A 04 2F   ...+...+ F...P../
2DC0:  AB 10 83 C4 02 B9 10 00  99 F7 F9 8B 46 DE B1 03   ........ ....F...
2DD0:  D3 E0 8B CA 99 2B C2 D1  F8 2B 46 0A F7 D8 50 8B   .....+.. .+F...P.
2DE0:  F1 9A 04 2F AB 10 83 C4  02 B9 10 00 99 F7 F9 83   .../.... ........
2DF0:  EA 10 F7 DA 3B D6 7E 03  E9 2A 00 8B 46 DE B1 03   ....;.~. .*..F...
2E00:  D3 E0 99 2B C2 D1 F8 2B  46 0A F7 D8 50 9A 04 2F   ...+...+ F...P../
2E10:  AB 10 83 C4 02 B9 10 00  99 F7 F9 8B C2 2D 10 00   ........ .....-..
2E20:  F7 D8 E9 22 00 8B 46 DE  B1 03 D3 E0 99 2B C2 D1   ..."..F. .....+..
2E30:  F8 2B 46 0A F7 D8 50 9A  04 2F AB 10 83 C4 02 B9   .+F...P. ./......
2E40:  10 00 99 F7 F9 8B C2 3D  04 00 7C 03 E9 A7 0A 8B   .......= ..|.....
2E50:  46 DE E9 15 00 8B 46 D8  89 46 B6 E9 22 00 8B 46   F.....F. .F.."..F
2E60:  E0 89 46 B6 E9 19 00 E9  16 00 0B C0 75 03 E9 E4   ..F..... ....u...
2E70:  FF 48 75 03 E9 E7 FF 48  75 03 E9 D8 FF E9 00 00   .Hu....H u.......
2E80:  8B 46 DE E9 CA 00 8B 46  F0 2B 06 AC 16 F7 2E B2   .F.....F .+......
2E90:  22 2B 06 A8 16 03 46 F8  89 46 C6 8B 46 F8 99 8E   "+....F. .F..F...
2EA0:  06 56 0D 8B C8 26 A1 E6  00 8B DA F7 6E F0 03 C8   .V...&.. ....n...
2EB0:  13 DA 89 4E 96 89 5E 98  A1 B2 22 89 46 F4 26 A1   ...N..^. ..".F.&.
2EC0:  E6 00 89 46 C4 E9 9E 00  8B 46 E8 2B 06 AC 16 F7   ...F.... .F.+....
2ED0:  2E B2 22 2B 06 A8 16 03  46 F8 89 46 C6 8B 46 F8   .."+.... F..F..F.
2EE0:  99 8E 06 56 0D 8B C8 26  A1 E6 00 8B DA F7 6E E8   ...V...& ......n.
2EF0:  03 C8 13 DA 89 4E 96 89  5E 98 C7 46 F4 01 00 C7   .....N.. ^..F....
```

EXTRACT.DMP          Thursday, January  6, 1994  12:02pm          Page 15


```
2F00:  46 C4 01 00 E9 5F 00 8B  46 E8 2B 06 AC 16 F7 2E   F...._.. F.+.....
2F10:  B2 22 2B 06 A8 16 03 46  EE 89 46 C6 8B 46 EE 99   ."+....F ..F..F..
2F20:  8E 06 56 0D 8B C8 26 A1  E6 00 8B DA F7 6E E8 03   ..V...&. .....n..
2F30:  C8 13 DA 89 4E 96 89 5E  98 A1 B2 22 F7 D8 89 46   ....N..^ ..."...F
2F40:  F4 26 A1 E6 00 F7 D8 89  46 C4 E9 19 00 E9 16 00   .&...... F.......
2F50:  0B C0 75 03 E9 2F FF 48  75 03 E9 6B FF 48 75 03   ..u../.H u..k.Hu.
2F60:  E9 A4 FF E9 00 00 83 7E  D4 02 74 03 E9 10 00 8B   .......~ ..t.....
2F70:  46 F4 01 46 C6 8B 46 C4  99 01 46 96 11 56 98 83   F..F..F. ..F..V..
2F80:  7E BA 00 75 03 E9 7D 01  8B 46 DE E9 44 01 B8 E8   ~..u..}. .F..D...
2F90:  03 BA 00 00 52 50 FF 76  E6 FF 76 E4 C4 5E 0C 26   ....RP.v ..v..^.&
2FA0:  8B 07 2B 46 F8 99 52 50  9A 74 30 AB 10 52 50 9A   ..+F..RP .t0..RP.
2FB0:  DA 2F AB 10 C4 5E 0C 26  03 47 02 2B 46 F0 40 89   ./...^.& .G.+F.@.
2FC0:  46 E2 B8 E8 03 BA 00 00  52 50 FF 76 E6 FF 76 E4   F....... RP.v..v.
2FD0:  C4 5E 10 26 8B 07 2B 46  F8 99 52 50 9A 74 30 AB   .^.&..+F ..RP.t0.
2FE0:  10 52 50 9A DA 2F AB 10  C4 5E 10 26 03 47 02 2B   .RP../.. .^.&.G.+
2FF0:  46 F0 40 89 46 B0 E9 EF  00 B8 18 FC BA FF FF 52   F.@.F... .......R
3000:  50 FF 76 CE FF 76 CC 8B  46 E8 C4 5E 0C 26 2B 47   P.v..v.. F..^.&+G
3010:  02 99 52 50 9A 74 30 AB  10 52 50 9A DA 2F AB 10   ..RP.t0. .RP../..
3020:  C4 5E 0C 26 03 07 2B 46  F8 40 89 46 E2 B8 18 FC   .^.&..+F .@.F....
3030:  BA FF FF 52 50 FF 76 CE  FF 76 CC 8B 46 E8 C4 5E   ...RP.v. .v..F..^
3040:  10 26 2B 47 02 99 52 50  9A 74 30 AB 10 52 50 9A   .&+G..RP .t0..RP.
3050:  DA 2F AB 10 C4 5E 10 26  03 07 2B 46 F8 40 89 46   ./...^.& ..+F.@.F
3060:  B0 E9 84 00 B8 E8 03 BA  00 00 52 50 FF 76 E6 FF   ........ ..RP.v..
3070:  76 E4 8B 46 EE C4 5E 0C  26 2B 07 99 52 50 9A 74   v..F..^. &+..RP.t
3080:  30 AB 10 52 50 9A DA 2F  AB 10 C4 5E 0C 26 2B 47   0..RP../ ...^.&+G
3090:  02 03 46 E8 40 89 46 E2  B8 E8 03 BA 00 00 52 50   ..F.@.F. ......RP
30A0:  FF 76 E6 FF 76 E4 8B 46  EE C4 5E 10 26 2B 07 99   .v..v..F ..^.&+..
30B0:  52 50 9A 74 30 AB 10 52  50 9A DA 2F AB 10 C4 5E   RP.t0..R P../...^
30C0:  10 26 2B 47 02 03 46 E8  40 89 46 B0 E9 19 00 E9   .&+G..F. @.F.....
30D0:  16 00 0B C0 75 03 E9 B5  FE 48 75 03 E9 1A FF 48   ....u... .Hu....H
30E0:  75 03 E9 7F FF E9 00 00  8B 46 E2 39 46 B0 7C 03   u....... .F.9F.|.
30F0:  E9 12 00 8B 46 E2 89 46  F6 8B 46 B0 89 46 E2 8B   ....F..F ..F..F..
3100:  46 F6 89 46 B0 8B 46 D4  FF 46 D4 89 46 C0 E9 13   F..F..F. .F..F...
3110:  00 FF 46 C0 8B 46 F4 01  46 C6 8B 46 C4 99 01 46   ..F..F.. F..F...F
3120:  96 11 56 98 8B 46 B6 39  46 C0 7E 03 E9 C7 07 8B   ..V..F.9 F.~.....
3130:  46 0A E9 33 02 8B 46 E0  89 46 9C E9 4A 02 83 7E   F..3..F. .F..J..~
3140:  DE 00 74 03 E9 2E 00 8B  46 C0 B9 02 00 99 F7 F9   ..t..... F.......
3150:  D1 E2 8B 46 C0 8B CA 99  2B C2 D1 F8 8B D0 D1 E0   ...F.... +.......
3160:  D1 E0 03 C2 03 C1 48 3B  46 E0 7F 03 E9 03 00 8B   ......H; F.......
3170:  46 E0 E9 30 00 8B 46 D8  B9 02 00 99 F7 F9 D1 E2   F..0..F. ........
3180:  8B 46 D8 8B CA 99 2B C2  D1 F8 8B D0 D1 E0 D1 E0   .F....+. ........
3190:  03 C2 03 C1 48 8B 4E E0  2B 4E C0 41 3B C1 7F 03   ....H.N. +N.A;...
31A0:  E9 02 00 8B C1 89 46 9C  E9 DD 01 83 7E DE 00 74   ......F. ....~..t
31B0:  03 E9 11 00 8B 46 E0 3B  46 C0 7F 03 E9 03 00 8B   .....F.; F.......
31C0:  46 C0 E9 12 00 8B 46 E0  2B 46 C0 40 3B 46 D8 7F   F.....F. +F.@;F..
31D0:  03 E9 03 00 8B 46 D8 89  46 9C E9 AB 01 83 7E DE   .....F.. F.....~.
31E0:  00 74 03 E9 2E 00 8B 46  E0 B9 02 00 99 F7 F9 D1   .t.....F ........
31F0:  E2 8B 46 E0 8B CA 99 2B  C2 D1 F8 8B D0 D1 E0 D1   ..F....+ ........
3200:  E0 03 C2 03 C1 48 3B 46  C0 7F 03 E9 03 00 8B 46   .....H;F .......F
3210:  C0 E9 33 00 8B 46 E0 2B  46 C0 40 B9 02 00 99 F7   ..3..F.+ F.@.....
3220:  F9 D1 E2 8B 46 E0 2B 46  C0 40 8B CA 99 2B C2 D1   ....F.+F .@...+..
3230:  F8 8B D0 D1 E0 D1 E0 03  C2 03 C1 48 3B 46 D8 7F   ........ ...H;F..
3240:  03 E9 03 00 8B 46 D8 89  46 9C E9 3B 01 8B 46 D8   .....F.. F..;..F.
3250:  89 46 9C E9 32 01 83 7E  DE 01 74 03 E9 2E 00 8B   .F..2..~ ..t.....
```

```
3260:  46 C0 B9 02 00 99 F7 F9  D1 E2 8B 46 C0 8B CA 99   F....... ...F....
3270:  2B C2 D1 F8 8B D0 D1 E0  D1 E0 03 C2 03 C1 48 3B   +....... ......H;
3280:  46 D8 7F 03 E9 03 00 8B  46 D8 E9 30 00 8B 46 E0   F....... F..0..F.
3290:  B9 02 00 99 F7 F9 D1 E2  8B 46 E0 8B CA 99 2B C2   ........ .F....+.
32A0:  D1 F8 8B D0 D1 E0 D1 E0  03 C2 03 C1 48 8B 4E D8   ........ ....H.N.
32B0:  2B 4E C0 41 3B C1 7F 03  E9 02 00 8B C1 89 46 9C   +N.A;... ......F.
32C0:  E9 C5 00 83 7E DE 01 74  03 E9 11 00 8B 46 D8 3B   ....~..t .....F.;
32D0:  46 C0 7F 03 E9 03 00 8B  46 C0 E9 12 00 8B 46 D8   F....... F.....F.
32E0:  2B 46 C0 40 3B 46 E0 7F  03 E9 03 00 8B 46 E0 89   +F.@;F.. .....F..
32F0:  46 9C E9 93 00 83 7E DE  01 74 03 E9 2E 00 8B 46   F.....~. .t.....F
3300:  D8 B9 02 00 99 F7 F9 D1  E2 8B 46 D8 8B CA 99 2B   ........ ..F....+
3310:  C2 D1 F8 8B D0 D1 E0 D1  E0 03 C2 03 C1 48 3B 46   ........ .....H;F
3320:  C0 7F 03 E9 03 00 8B 46  C0 E9 33 00 8B 46 D8 2B   .......F ..3..F.+
3330:  46 C0 40 B9 02 00 99 F7  F9 D1 E2 8B 46 D8 2B 46   F.@..... ....F.+F
3340:  C0 40 8B CA 99 2B C2 D1  F8 8B D0 D1 E0 D1 E0 03   .@...+.. ........
3350:  C2 03 C1 48 3B 46 E0 7F  03 E9 03 00 8B 46 E0 89   ...H;F.. .....F..
3360:  46 9C E9 23 00 E9 20 00  3D 07 00 76 03 E9 18 00   F..#.. . =..v....
3370:  D1 E0 93 2E FF A7 78 14  35 12 3E 12 AB 12 DD 12   ......x. 5.>.....
3380:  4D 13 56 13 C3 13 F5 13  83 7E BA 00 75 03 E9 44   M.V..... .~..u..D
3390:  00 83 7E B2 00 74 03 E9  3B 00 8B 46 E2 39 46 C0   ..~..t.. ;..F.9F.
33A0:  7D 03 E9 1F 00 8B 46 B0  39 46 C0 7E 03 E9 14 00   }.....F. 9F.~....
33B0:  8B 46 94 40 8B C8 D1 E0  03 C1 D1 E0 03 C1 89 46   .F.@.... .......F
33C0:  92 E9 11 00 8B 46 FA 40  8B C8 D1 E0 03 C1 D1 E0   .....F.@ ........
33D0:  03 C1 89 46 92 8B 46 96  8B 56 98 89 46 DA 89 56   ...F..F. .V..F..V
33E0:  DC A1 D4 0E 8B 16 D6 0E  2B 46 F2 03 46 C6 89 46   ........ +F..F..F
33F0:  D0 89 56 D2 A1 D4 0E 8B  16 D6 0E 03 46 C6 03 46   ..V..... ....F..F
3400:  AC 89 46 84 89 56 86 8B  46 D0 8B 56 D2 89 46 BC   ..F..V.. F..V..F.
3410:  89 56 BE C7 46 CA 00 00  8B 46 D6 E9 C5 04 8B 46   .V..F... .F.....F
3420:  84 8B 56 86 39 46 BC 74  03 E9 08 00 39 56 BE 75   ..V.9F.t ....9V.u
3430:  03 E9 3D 00 8B 46 C2 01  46 BC C4 5E BC 26 8A 07   ..=..F.. F..^.&..
3440:  2A E4 89 46 EA 81 7E EA  FF 00 74 03 E9 08 00 8A   *..F..~. ..t.....
3450:  46 C8 2A E4 E9 14 00 83  7E EA 00 74 03 E9 08 00   F.*..... ~..t....
3460:  8A 46 EC 2A E4 E9 03 00  8B 46 EA 01 46 CA E9 AD   .F.*.... .F..F...
3470:  FF C7 46 AE 00 00 E9 84  00 FF 46 AE 8B 46 9E 99   ..F..... ..F..F..
3480:  01 46 DA 11 56 DC 8B 46  C2 01 46 D0 8B 46 C2 01   .F..V..F ..F..F..
3490:  46 84 C4 5E 84 26 80 3F  FF 74 03 E9 08 00 8A 46   F..^.&.? .t.....F
34A0:  C8 2A E4 E9 1C 00 C4 5E  84 26 80 3F 00 74 03 E9   .*.....^ .&.?.t..
34B0:  08 00 8A 46 EC 2A E4 E9  08 00 C4 5E 84 26 8A 07   ...F.*.. ...^.&..
34C0:  2A E4 89 46 80 C4 5E D0  26 80 3F FF 74 03 E9 08   *..F..^. &.?.t...
34D0:  00 8A 46 C8 2A E4 E9 1C  00 C4 5E D0 26 80 3F 00   ..F.*... ..^.&.?.
34E0:  74 03 E9 08 00 8A 46 EC  2A E4 E9 08 00 C4 5E D0   t.....F. *.....^.
34F0:  26 8A 07 2A E4 2B 46 80  F7 D8 01 46 CA 8B 46 9C   &..*.+F. ...F..F.
3500:  39 46 AE 7C 03 E9 2D 01  8B 46 DA 8B 56 DC 8E 06   9F.|..-. .F..V...
3510:  70 0D 26 03 06 EE 77 83  D2 00 B9 0C 00 D3 E2 26   p.&...w. .......&
3520:  03 16 F0 77 8E C2 8B D8  26 8A 07 2A E4 89 46 EA   ...w.... &..*..F.
3530:  3D 00 00 75 03 E9 13 00  81 7E EA FF 00 75 03 E9   =..u.... .~...u..
3540:  09 00 83 7E EA 7F 74 03  E9 03 00 E9 2B FF 8B 46   ...~..t. ....+..F
3550:  CA 39 46 92 7E 03 E9 B5  00 8B 46 DA 8B 56 DC 8E   .9F.~... ..F..V..
3560:  06 70 0D 26 03 06 EE 77  83 D2 00 B9 0C 00 D3 E2   .p.&...w ........
3570:  26 03 16 F0 77 8E C2 8B  D8 26 C6 07 FF 83 7E B8   &...w... .&....~.
3580:  00 75 03 E9 85 00 8E 06  56 0D 26 A1 E6 00 99 52   .u...... V.&....R
3590:  50 FF 76 DC FF 76 DA 9A  A6 30 AB 10 8E 06 72 0D   P.v..v.. .0....r.
35A0:  26 A3 04 00 8E 06 56 0D  26 A1 E6 00 99 52 50 FF   &.....V. &....RP.
35B0:  76 DC FF 76 DA 9A DA 2F  AB 10 8E 06 74 0D 26 A3   v..v.../ ....t.&.
```

EXTRACT.DMP Thursday, January 6, 1994 12:02pm Page 17


```
35C0:  06 00 8E 06 72 0D 8B 46  F8 26 39 06 04 00 7F 03   ....r..F .&9.....
35D0:  E9 38 00 8B 46 EE 26 39  06 04 00 7C 03 E9 2B 00   .8..F.&9 ...|..+.
35E0:  8E 06 74 0D 8B 46 F0 26  39 06 06 00 7F 03 E9 1A   ..t..F.& 9.......
35F0:  00 8B 46 E8 26 39 06 06  00 7C 03 E9 0D 00 C4 5E   ..F.&9.. .|.....^
3600:  14 26 C7 07 01 00 C7 46  B8 00 00 E9 24 00 8B 46   .&.....F ....$..F
3610:  DA 8B 56 DC 8E 06 70 0D  26 03 06 EE 77 83 D2 00   ..V...p. &...w...
3620:  B9 0C 00 D3 E2 26 03 16  F0 77 8E C2 8B D8 26 C6   .....&.. .w....&.
3630:  07 00 E9 44 FE E9 BB 02  B8 04 00 2B 46 82 B9 05   ...D.... ...+F...
3640:  00 99 F7 F9 89 56 FC 8B  46 84 8B 56 86 39 46 BC   .....V.. F..V.9F.
3650:  74 03 E9 08 00 39 56 BE  75 03 E9 56 00 8B 76 FC   t....9V. u..V..v.
3660:  D1 E6 8B 42 A0 01 46 BC  FF 46 FC C4 5E BC 26 8A   ...B..F. .F..^.&.
3670:  07 2A E4 89 46 EA 81 7E  EA FF 00 74 03 E9 08 00   .*..F..~ ...t....
3680:  8A 46 C8 2A E4 E9 14 00  83 7E EA 00 74 03 E9 08   .F.*.... .~..t...
3690:  00 8A 46 EC 2A E4 E9 03  00 8B 46 EA 01 46 CA 83   ..F.*... ..F..F..
36A0:  7E FC 05 74 03 E9 08 00  C7 46 FC 00 00 E9 00 00   ~..t.... .F......
36B0:  E9 94 FF B8 00 00 89 46  AE 89 46 FE B8 04 00 2B   .......F ..F....+
36C0:  46 82 B9 05 00 99 F7 F9  89 56 AA 8B 46 82 99 F7   F....... .V..F...
36D0:  F9 89 56 9A E9 D1 00 8B  76 FE D1 E6 8B 42 88 99   ..V..... v....B..
36E0:  01 46 DA 11 56 DC 8B 76  AA D1 E6 8B 42 A0 01 46   .F..V..v ....B..F
36F0:  D0 FF 46 AA 8B 76 9A D1  E6 8B 42 A0 01 46 84 FF   ..F..v.. ..B..F..
3700:  46 9A FF 46 FE 83 7E FE  05 74 03 E9 08 00 C7 46   F..F..~. .t.....F
3710:  FE 00 00 E9 00 00 83 7E  AA 05 74 03 E9 08 00 C7   .......~ ..t.....
3720:  46 AA 00 00 E9 00 00 83  7E 9A 05 74 03 E9 08 00   F....... ~..t....
3730:  C7 46 9A 00 00 E9 00 00  C4 5E 84 26 80 3F FF 74   .F...... .^.&.?.t
3740:  03 E9 08 00 8A 46 C8 2A  E4 E9 1C 00 C4 5E 84 26   .....F.* .....^.&
3750:  80 3F 00 74 03 E9 08 00  8A 46 EC 2A E4 E9 08 00   .?.t.... .F.*....
3760:  C4 5E 84 26 8A 07 2A E4  89 86 7E FF C4 5E D0 26   .^.&..*. ..~..^.&
3770:  80 3F FF 74 03 E9 08 00  8A 46 C8 2A E4 E9 1C 00   .?.t.... .F.*....
3780:  C4 5E D0 26 80 3F 00 74  03 E9 08 00 8A 46 EC 2A   .^.&.?.t .....F.*
3790:  E4 E9 08 00 C4 5E D0 26  8A 07 2A E4 2B 86 7E FF   .....^.& ..*.+.~.
37A0:  F7 D8 01 46 CA FF 46 AE  8B 46 9C 39 46 AE 7C 03   ...F..F. .F.9F.|.
37B0:  E9 2D 01 8B 46 DA 8B 56  DC 8E 06 70 0D 26 03 06   .-..F..V ...p.&..
37C0:  EE 77 83 D2 00 B9 0C 00  D3 E2 26 03 16 F0 77 8E   .w...... ..&...w.
37D0:  C2 8B D8 26 8A 07 2A E4  89 46 EA 3D 00 00 75 03   ...&..*. .F.=..u.
37E0:  E9 13 00 81 7E EA FF 00  75 03 E9 09 00 83 7E EA   ....~... u.....~.
37F0:  7F 74 03 E9 03 00 E9 DE  FE 8B 46 CA 39 46 92 7E   .t...... ..F.9F.~
3800:  03 E9 B5 00 8B 46 DA 8B  56 DC 8E 06 70 0D 26 03   .....F.. V...p.&.
3810:  06 EE 77 83 D2 00 B9 0C  00 D3 E2 26 03 16 F0 77   ..w..... ...&...w
3820:  8E C2 8B D8 26 C6 07 FF  83 7E B8 00 75 03 E9 85   ....&... .~..u...
3830:  00 8E 06 56 0D 26 A1 E6  00 99 52 50 FF 76 DC FF   ...V.&.. ..RP.v..
3840:  76 DA 9A A6 30 AB 10 8E  06 72 0D 26 A3 04 00 8E   v...0... .r.&....
3850:  06 56 0D 26 A1 E6 00 99  52 50 FF 76 DC FF 76 DA   .V.&.... RP.v..v.
3860:  9A DA 2F AB 10 8E 06 74  0D 26 A3 06 00 8E 06 72   ../....t .&.....r
3870:  0D 8B 46 F8 26 39 06 04  00 7F 03 E9 38 00 8B 46   ..F.&9.. ....8..F
3880:  EE 26 39 06 04 00 7C 03  E9 2B 00 8E 06 74 0D 8B   .&9...|. .+...t..
3890:  46 F0 26 39 06 06 00 7F  03 E9 1A 00 8B 46 E8 26   F.&9.... .....F.&
38A0:  39 06 06 00 7C 03 E9 0D  00 C4 5E 14 26 C7 07 01   9...|... ..^.&...
38B0:  00 C7 46 B8 00 00 E9 24  00 8B 46 DA 8B 56 DC 8E   ..F....$ ..F..V..
38C0:  06 70 0D 26 03 06 EE 77  83 D2 00 B9 0C 00 D3 E2   .p.&...w ........
38D0:  26 03 16 F0 77 8E C2 8B  D8 26 C6 07 00 E9 F7 FD   &...w... .&......
38E0:  E9 10 00 0B C0 75 03 E9  34 FB 48 75 03 E9 48 FD   .....u.. 4.Hu..H.
38F0:  E9 00 00 E9 1B F8 E9 A6  F4 5E 5F 8B E5 5D CB 55   ........ .^_..].U
3900:  8B EC 81 EC 7C 00 57 56  C4 5E 14 26 83 3F 01 1B   ....|.WV .^.&.?..
3910:  C0 F7 D8 89 46 BC C7 46  86 03 00 8B 46 0A B9 02   ....F..F ....F...
```

```
3920:  00 99 F7 F9 89 56 D8 8B  46 0A E9 51 01 B8 01 00   .....V.. F..Q....
3930:  89 46 C6 89 46 A2 E9 65  01 B8 01 00 8E 06 56 0D   .F..F..e ......V.
3940:  26 2B 06 E6 00 89 46 A2  B8 01 00 2B 06 B2 22 89   &+....F. ...+..".
3950:  46 C6 E9 49 01 8E 06 56  0D 26 A1 E6 00 F7 D8 89   F..I...V .&......
3960:  46 A2 A1 B2 22 F7 D8 89  46 C6 E9 31 01 B8 FF FF   F..."... F..1....
3970:  8E 06 56 0D 26 2B 06 E6  00 89 46 A2 B8 FF FF 2B   ..V.&+.. ..F....+
3980:  06 B2 22 89 46 C6 E9 15  01 B8 01 00 8E 06 56 0D   ..".F... ......V.
3990:  26 2B 06 E6 00 89 46 92  89 46 8C B8 01 00 2B 06   &+....F. .F....+.
39A0:  B2 22 89 46 AA 89 46 A4  B8 01 00 89 46 94 89 46   .".F..F. ....F..F
39B0:  90 89 46 8E B8 01 00 89  46 AC 89 46 A8 89 46 A6   ..F..... F..F..F.
39C0:  E9 DB 00 B8 01 00 8E 06  56 0D 26 2B 06 E6 00 89   ........ V.&+....
39D0:  46 92 89 46 8C B8 01 00  2B 06 B2 22 89 46 AA 89   F..F.... +..".F..
39E0:  46 A4 26 A1 E6 00 F7 D8  89 46 94 89 46 90 89 46   F.&..... .F..F..F
39F0:  8E A1 B2 22 F7 D8 89 46  AC 89 46 A8 89 46 A6 E9   ..."...F .F..F...
3A00:  9C 00 B8 FF FF 8E 06 56  0D 26 2B 06 E6 00 89 46   .......V .&+....F
3A10:  92 89 46 8C B8 FF FF 2B  06 B2 22 89 46 AA 89 46   ..F....+ ..".F..F
3A20:  A4 26 A1 E6 00 F7 D8 89  46 94 89 46 90 89 46 8E   .&...... F..F..F.
3A30:  A1 B2 22 F7 D8 89 46 AC  89 46 A8 89 46 A6 E9 5D   .."...F. .F..F..]
3A40:  00 B8 FF FF 8E 06 56 0D  26 2B 06 E6 00 89 46 92   ......V. &+....F.
3A50:  89 46 8C B8 FF FF 2B 06  B2 22 89 46 AA 89 46 A4   .F....+. .".F..F.
3A60:  B8 FF FF 89 46 94 89 46  90 89 46 8E B8 FF FF 89   ....F..F ..F.....
3A70:  46 AC 89 46 A8 89 46 A6  E9 23 00 E9 20 00 3D 07   F..F..F. .#.. .=.
3A80:  00 76 03 E9 18 00 D1 E0  93 2E FF A7 8E 1B 2D 1A   .v...... ......-.
3A90:  89 1A 39 1A C3 1A 55 1A  02 1B 6D 1A 41 1B 8B 46   ..9...U. ..m.A..F
3AA0:  D8 E9 78 00 8B 46 86 40  F7 6E C6 89 46 F2 8B 46   ..x..F.@ .n..F..F
3AB0:  86 F7 6E C6 89 46 B0 E9  72 00 B8 00 00 89 46 B8   ..n..F.. r.....F.
3AC0:  89 46 F2 89 46 B0 E9 0C  00 B9 05 00 8B 46 B8 99   .F..F... .....F..
3AD0:  F7 F9 89 56 B8 8B 46 B8  39 46 86 7F 03 E9 20 00   ...V..F. 9F.... .
3AE0:  8B 76 B8 D1 E6 8B 42 A4  01 46 B0 FF 46 B8 8D 5E   .v....B. .F..F..^
3AF0:  AE 8B 46 B8 D1 E0 2B D8  8B 07 01 46 F2 E9 C9 FF   ..F...+. ...F....
3B00:  B8 04 00 2B 46 86 B9 05  00 99 F7 F9 8B F2 D1 E6   ...+F... ........
3B10:  8B 42 A4 01 46 F2 E9 13  00 E9 10 00 0B C0 75 03   .B..F... ......u.
3B20:  E9 81 FF 48 75 03 E9 91  FF E9 00 00 C4 5E 06 26   ...Hu... .....^.&
3B30:  8B 47 02 89 46 F8 C4 5E  06 26 8B 47 04 89 46 EE   .G..F..^ .&.G..F.
3B40:  C4 5E 06 26 8B 47 06 89  46 F0 C4 5E 06 26 8B 47   .^.&.G.. F..^.&.G
3B50:  08 89 46 EA 8B 46 EE 2B  46 F8 40 89 46 E2 8B 46   ..F..F.+ F.@.F..F
3B60:  EA 2B 46 F0 40 89 46 DA  C7 46 B6 00 00 8B 46 0E   .+F.@.F. .F....F.
3B70:  0B 46 0C 75 03 E9 48 00  C7 46 BE 01 00 8B 5E 0A   .F.u..H. .F....^.
3B80:  D1 E3 D1 E3 8B 87 B2 0E  8B 97 B4 0E 89 46 E6 89   ........ .....F..
3B90:  56 E8 8B 5E 0A D1 E3 D1  E3 8B 87 BA 22 8B 97 BC   V..^.... ...."...
3BA0:  22 89 46 CE 89 56 D0 A1  D2 0E 2B 06 68 06 89 46   ".F..V.. ..+.h..F
3BB0:  98 A1 68 06 D1 E0 03 06  D2 0E 89 46 FA E9 23 00   ..h..... ...F..#.
3BC0:  C7 46 BE 00 00 83 7E B6  00 74 03 E9 15 00 A1 D2   .F....~. .t......
3BD0:  0E 2B 06 68 06 40 8B C8  D1 E0 03 C1 D1 E0 03 C1   .+.h.@.. ........
3BE0:  89 46 96 C7 46 D6 01 00  C7 46 E0 00 00 E9 03 00   .F..F... .F......
3BF0:  FF 46 E0 83 7E E0 03 7C  03 E9 4E 0A 8B 46 E0 B1   .F..~..| ..N..F..
3C00:  03 D3 E0 99 2B C2 D1 F8  2B 46 0A F7 D8 50 9A 04   ....+... +F...P..
3C10:  2F AB 10 83 C4 02 B9 10  00 99 F7 F9 8B 46 E0 B1   /....... .....F..
3C20:  03 D3 E0 8B CA 99 2B C2  D1 F8 2B 46 0A F7 D8 50   ......+. ..+F...P
3C30:  8B F1 9A 04 2F AB 10 83  C4 02 B9 10 00 99 F7 F9   ..../... ........
3C40:  83 EA 10 F7 DA 3B D6 7E  03 E9 2A 00 8B 46 E0 B1   .....;.~ ..*..F..
3C50:  03 D3 E0 99 2B C2 D1 F8  2B 46 0A F7 D8 50 9A 04   ....+... +F...P..
3C60:  2F AB 10 83 C4 02 B9 10  00 99 F7 F9 8B C2 2D 10   /....... ......-.
3C70:  00 F7 D8 E9 22 00 8B 46  E0 B1 03 D3 E0 99 2B C2   ...."..F ......+.
```

```
3C80:  D1 F8 2B 46 0A F7 D8 50  9A 04 2F AB 10 83 C4 02   ..+F...P ../.....
3C90:  B9 10 00 99 F7 F9 8B C2  3D 04 00 7C 03 E9 A7 09   ........ =..|....
3CA0:  8B 46 E0 E9 15 00 8B 46  DA 89 46 BA E9 22 00 8B   .F.....F ..F.."..
3CB0:  46 E2 89 46 BA E9 19 00  E9 16 00 0B C0 75 03 E9   F..F.... .....u..
3CC0:  E4 FF 48 75 03 E9 E7 FF  48 75 03 E9 D8 FF E9 00   ..Hu.... Hu......
3CD0:  00 8B 46 E0 E9 CA 00 8B  46 F0 2B 06 AC 16 F7 2E   ..F..... F.+.....
3CE0:  B2 22 2B 06 A8 16 03 46  F8 89 46 CA 8B 46 F8 99   ."+....F ..F..F..
3CF0:  8E 06 56 0D 8B C8 26 A1  E6 00 8B DA F7 6E F0 03   ..V...&. .....n..
3D00:  C8 13 DA 89 4E 9A 89 5E  9C A1 B2 22 89 46 F4 26   ....N..^ ...".F.&
3D10:  A1 E6 00 89 46 C8 E9 9E  00 8B 46 EA 2B 06 AC 16   ....F... ..F.+...
3D20:  F7 2E B2 22 2B 06 A8 16  03 46 F8 89 46 CA 8B 46   ..."+... .F..F..F
3D30:  F8 99 8E 06 56 0D 8B C8  26 A1 E6 00 8B DA F7 6E   ....V... &......n
3D40:  EA 03 C8 13 DA 89 4E 9A  89 5E 9C C7 46 F4 01 00   ......N. .^..F...
3D50:  C7 46 C8 01 00 E9 5F 00  8B 46 EA 2B 06 AC 16 F7   .F...._. .F.+....
3D60:  2E B2 22 2B 06 A8 16 03  46 EE 89 46 CA 8B 46 EE   .."+.... F..F..F.
3D70:  99 8E 06 56 0D 8B C8 26  A1 E6 00 8B DA F7 6E EA   ...V...& ......n.
3D80:  03 C8 13 DA 89 4E 9A 89  5E 9C A1 B2 22 F7 D8 89   .....N.. ^..."...
3D90:  46 F4 26 A1 E6 00 F7 D8  89 46 C8 E9 19 00 E9 16   F.&..... .F......
3DA0:  00 0B C0 75 03 E9 2F FF  48 75 03 E9 6B FF 48 75   ...u../. Hu..k.Hu
3DB0:  03 E9 A4 FF E9 00 00 83  7E D6 02 74 03 E9 10 00   ........ ~..t....
3DC0:  8B 46 F4 01 46 CA 8B 46  C8 99 01 46 9A 11 56 9C   .F..F..F ...F..V.
3DD0:  83 7E BE 00 75 03 E9 7D  01 8B 46 E0 E9 44 01 B8   .~..u..} ..F..D..
3DE0:  E8 03 BA 00 00 52 50 FF  76 E8 FF 76 E6 C4 5E 0C   .....RP. v..v..^.
3DF0:  26 8B 07 2B 46 F8 99 52  50 9A 74 30 AB 10 52 50   &..+F..R P.t0..RP
3E00:  9A DA 2F AB 10 C4 5E 0C  26 03 47 02 2B 46 F0 40   ../...^. &.G.+F.@
3E10:  89 46 E4 B8 E8 03 BA 00  00 52 50 FF 76 E8 FF 76   .F...... .RP.v..v
3E20:  E6 C4 5E 10 26 8B 07 2B  46 F8 99 52 50 9A 74 30   ..^.&..+ F..RP.t0
3E30:  AB 10 52 50 9A DA 2F AB  10 C4 5E 10 26 03 47 02   ..RP../. ..^.&.G.
3E40:  2B 46 F0 40 89 46 B4 E9  EF 00 B8 18 FC BA FF FF   +F.@.F.. ........
3E50:  52 50 FF 76 D0 FF 76 CE  8B 46 EA C4 5E 0C 26 2B   RP.v..v. .F..^.&+
3E60:  47 02 99 52 50 9A 74 30  AB 10 52 50 9A DA 2F AB   G..RP.t0 ..RP../.
3E70:  10 C4 5E 0C 26 03 07 2B  46 F8 40 89 46 E4 B8 18   ..^.&..+ F.@.F...
3E80:  FC BA FF FF 52 50 FF 76  D0 FF 76 CE 8B 46 EA C4   ....RP.v ..v..F..
3E90:  5E 10 26 2B 47 02 99 52  50 9A 74 30 AB 10 52 50   ^.&+G..R P.t0..RP
3EA0:  9A DA 2F AB 10 C4 5E 10  26 03 07 2B 46 F8 40 89   ../...^. &..+F.@.
3EB0:  46 B4 E9 84 00 B8 E8 03  BA 00 00 52 50 FF 76 E8   F....... ...RP.v.
3EC0:  FF 76 E6 8B 46 EE C4 5E  0C 26 2B 07 99 52 50 9A   .v..F..^ .&+..RP.
3ED0:  74 30 AB 10 52 50 9A DA  2F AB 10 C4 5E 0C 26 2B   t0..RP.. /...^.&+
3EE0:  47 02 03 46 EA 40 89 46  E4 B8 E8 03 BA 00 00 52   G..F.@.F .......R
3EF0:  50 FF 76 E8 FF 76 E6 8B  46 EE C4 5E 10 26 2B 07   P.v..v.. F..^.&+.
3F00:  99 52 50 9A 74 30 AB 10  52 50 9A DA 2F AB 10 C4   .RP.t0.. RP../...
3F10:  5E 10 26 2B 47 02 03 46  EA 40 89 46 B4 E9 19 00   ^.&+G..F .@.F....
3F20:  E9 16 00 0B C0 75 03 E9  B5 FE 48 75 03 E9 1A FF   .....u.. ..Hu....
3F30:  48 75 03 E9 7F FF E9 00  00 8B 46 E4 39 46 B4 7C   Hu...... ..F.9F.|
3F40:  03 E9 12 00 8B 46 E4 89  46 F6 8B 46 B4 89 46 E4   .....F.. F..F..F.
3F50:  8B 46 F6 89 46 B4 8B 46  D6 FF 46 D6 89 46 C4 E9   .F..F..F ..F..F..
3F60:  13 00 FF 46 C4 8B 46 F4  01 46 CA 8B 46 C8 99 01   ...F..F. .F..F...
3F70:  46 9A 11 56 9C 8B 46 BA  39 46 C4 7E 03 E9 C7 06   F..V..F. 9F.~....
3F80:  8B 46 0A E9 33 02 8B 46  E2 89 46 A0 E9 4A 02 83   .F..3..F ..F..J..
3F90:  7E E0 00 74 03 E9 2E 00  8B 46 C4 B9 02 00 99 F7   ~..t.... .F......
3FA0:  F9 D1 E2 8B 46 C4 8B CA  99 2B C2 D1 F8 8B D0 D1   ....F... .+......
3FB0:  E0 D1 E0 03 C2 03 C1 48  3B 46 E2 7F 03 E9 03 00   .......H ;F......
3FC0:  8B 46 E2 E9 30 00 8B 46  DA B9 02 00 99 F7 F9 D1   .F..0..F ........
3FD0:  E2 8B 46 DA 8B CA 99 2B  C2 D1 F8 8B D0 D1 E0 D1   ..F....+ ........
```

```
3FE0:  E0 03 C2 03 C1 48 8B 4E  E2 2B 4E C4 41 3B C1 7F   .....H.N .+N.A;..
3FF0:  03 E9 02 00 8B C1 89 46  A0 E9 DD 01 83 7E E0 00   .......F .....~..
4000:  74 03 E9 11 00 8B 46 E2  3B 46 C4 7F 03 E9 03 00   t.....F. ;F......
4010:  8B 46 C4 E9 12 00 8B 46  E2 2B 46 C4 40 3B 46 DA   .F.....F .+F.@;F.
4020:  7F 03 E9 03 00 8B 46 DA  89 46 A0 E9 AB 01 83 7E   ......F. .F.....~
4030:  E0 00 74 03 E9 2E 00 8B  46 E2 B9 02 00 99 F7 F9   ..t..... F.......
4040:  D1 E2 8B 46 E2 8B CA 99  2B C2 D1 F8 8B D0 D1 E0   ...F.... +.......
4050:  D1 E0 03 C2 03 C1 48 3B  46 C4 7F 03 E9 03 00 8B   ......H; F.......
4060:  46 C4 E9 33 00 8B 46 E2  2B 46 C4 40 B9 02 00 99   F..3..F. +F.@....
4070:  F7 F9 D1 E2 8B 46 E2 2B  46 C4 40 8B CA 99 2B C2   .....F.+ F.@...+.
4080:  D1 F8 8B D0 D1 E0 D1 E0  03 C2 03 C1 48 3B 46 DA   ........ ....H;F.
4090:  7F 03 E9 03 00 8B 46 DA  89 46 A0 E9 3B 01 8B 46   ......F. .F..;..F
40A0:  DA 89 46 A0 E9 32 01 83  7E E0 01 74 03 E9 2E 00   ..F..2.. ~..t....
40B0:  8B 46 C4 B9 02 00 99 F7  F9 D1 E2 8B 46 C4 8B CA   .F...... ....F...
40C0:  99 2B C2 D1 F8 8B D0 D1  E0 D1 E0 03 C2 03 C1 48   .+...... .......H
40D0:  3B 46 DA 7F 03 E9 03 00  8B 46 DA E9 30 00 8B 46   ;F...... .F..0..F
40E0:  E2 B9 02 00 99 F7 F9 D1  E2 8B 46 E2 8B CA 99 2B   ........ ..F....+
40F0:  C2 D1 F8 8B D0 D1 E0 D1  E0 03 C2 03 C1 48 8B 4E   ........ .....H.N
4100:  DA 2B 4E C4 41 3B C1 7F  03 E9 02 00 8B C1 89 46   .+N.A;.. .......F
4110:  A0 E9 C5 00 83 7E E0 01  74 03 E9 11 00 8B 46 DA   .....~.. t.....F.
4120:  3B 46 C4 7F 03 E9 03 00  8B 46 C4 E9 12 00 8B 46   ;F...... .F.....F
4130:  DA 2B 46 C4 40 3B 46 E2  7F 03 E9 03 00 8B 46 E2   .+F.@;F. ......F.
4140:  89 46 A0 E9 93 00 83 7E  E0 01 74 03 E9 2E 00 8B   .F.....~ ..t.....
4150:  46 DA B9 02 00 99 F7 F9  D1 E2 8B 46 DA 8B CA 99   F....... ...F....
4160:  2B C2 D1 F8 8B D0 D1 E0  D1 E0 03 C2 03 C1 48 3B   +....... ......H;
4170:  46 C4 7F 03 E9 03 00 8B  46 C4 E9 33 00 8B 46 DA   F....... F..3..F.
4180:  2B 46 C4 40 B9 02 00 99  F7 F9 D1 E2 8B 46 DA 2B   +F.@.... .....F.+
4190:  46 C4 40 8B CA 99 2B C2  D1 F8 8B D0 D1 E0 D1 E0   F.@...+. ........
41A0:  03 C2 03 C1 48 3B 46 E2  7F 03 E9 03 00 8B 46 E2   ....H;F. ......F.
41B0:  89 46 A0 E9 23 00 E9 20  00 3D 07 00 76 03 E9 18   .F..#..  .=..v...
41C0:  00 D1 E0 93 2E FF A7 C9  22 86 20 8F 20 FC 20 2E   ........ ". . . .
41D0:  21 9E 21 A7 21 14 22 46  22 83 7E BE 00 75 03 E9   !.!.!."F ".~..u..
41E0:  44 00 83 7E B6 00 74 03  E9 3B 00 8B 46 E4 39 46   D..~..t. .;..F.9F
41F0:  C4 7D 03 E9 1F 00 8B 46  B4 39 46 C4 7E 03 E9 14   .}.....F .9F.~...
4200:  00 8B 46 98 40 8B C8 D1  E0 03 C1 D1 E0 03 C1 89   ..F.@... ........
4210:  46 96 E9 11 00 8B 46 FA  40 8B C8 D1 E0 03 C1 D1   F.....F. @.......
4220:  E0 03 C1 89 46 96 8B 46  9A 8B 56 9C 89 46 DC 89   ....F..F ..V..F..
4230:  56 DE A1 D4 0E 8B 16 D6  0E 2B 46 F2 03 46 CA 89   V....... .+F..F..
4240:  46 D2 89 56 D4 A1 D4 0E  8B 16 D6 0E 03 46 CA 03   F..V.... .....F..
4250:  46 B0 89 46 88 89 56 8A  8B 46 D2 8B 56 D4 89 46   F..F..V. .F..V..F
4260:  C0 89 56 C2 C7 46 CC 00  00 8B 46 D8 E9 C5 03 8B   ..V..F.. ..F.....
4270:  46 88 8B 56 8A 39 46 C0  74 03 E9 08 00 39 56 C2   F..V.9F. t....9V.
4280:  75 03 E9 14 00 8B 46 C6  01 46 C0 C4 5E C0 26 8A   u.....F. .F..^.&.
4290:  07 2A E4 01 46 CC E9 D6  FF C7 46 B2 00 00 E9 2E   .*..F... ..F.....
42A0:  00 FF 46 B2 8B 46 A2 99  01 46 DC 11 56 DE 8B 46   ..F..F.. .F..V..F
42B0:  C6 01 46 88 C4 5E 88 26  8A 07 2A E4 8B 4E C6 01   ..F..^.& ..*..N..
42C0:  4E D2 C4 5E D2 26 8A 0F  2A ED 2B C1 01 46 CC 8B   N..^.&.. *.+..F..
42D0:  46 A0 39 46 B2 7C 03 E9  2D 01 8B 46 DC 8B 56 DE   F.9F.|.. -..F..V.
42E0:  8E 06 70 0D 26 03 06 EE  77 83 D2 00 B9 0C 00 D3   ..p.&... w.......
42F0:  E2 26 03 16 F0 77 8E C2  8B D8 26 8A 07 2A E4 89   .&...w.. ..&..*..
4300:  46 EC 3D 00 00 75 03 E9  13 00 81 7E EC FF 00 75   F.=..u.. ...~...u
4310:  03 E9 09 00 83 7E EC 7F  74 03 E9 03 00 E9 81 FF   .....~.. t.......
4320:  8B 46 CC 39 46 96 7E 03  E9 B5 00 8B 46 DC 8B 56   .F.9F.~. ....F..V
4330:  DE 8E 06 70 0D 26 03 06  EE 77 83 D2 00 B9 0C 00   ...p.&.. .w......
```

```
4340:  D3 E2 26 03 16 F0 77 8E  C2 8B D8 26 C6 07 FF 83   ..&...w. ...&....
4350:  7E BC 00 75 03 E9 85 00  8E 06 56 0D 26 A1 E6 00   ~..u.... ..V.&...
4360:  99 52 50 FF 76 DE FF 76  DC 9A A6 30 AB 10 8E 06   .RP.v..v ...0....
4370:  72 0D 26 A3 04 00 8E 06  56 0D 26 A1 E6 00 99 52   r.&..... V.&....R
4380:  50 FF 76 DE FF 76 DC 9A  DA 2F AB 10 8E 06 74 0D   P.v..v.. ./....t.
4390:  26 A3 06 00 8E 06 72 0D  8B 46 F8 26 39 06 04 00   &.....r. .F.&9...
43A0:  7F 03 E9 38 00 8B 46 EE  26 39 06 04 00 7C 03 E9   ...8..F. &9...|..
43B0:  2B 00 8E 06 74 0D 8B 46  F0 26 39 06 06 00 7F 03   +...t..F .&9.....
43C0:  E9 1A 00 8B 46 EA 26 39  06 06 00 7C 03 E9 0D 00   ....F.&9 ...|....
43D0:  C4 5E 14 26 C7 07 01 00  C7 46 BC 00 00 E9 24 00   .^.&.... .F....$.
43E0:  8B 46 DC 8B 56 DE 8E 06  70 0D 26 03 06 EE 77 83   .F..V... p.&...w.
43F0:  D2 00 B9 0C 00 D3 E2 26  03 16 F0 77 8E C2 8B D8   .......& ...w....
4400:  26 C6 07 00 E9 9A FE E9  3A 02 B8 04 00 2B 46 86   &....... :....+F.
4410:  B9 05 00 99 F7 F9 89 56  FC 8B 46 88 8B 56 8A 39   .......V ..F..V.9
4420:  46 C0 74 03 E9 08 00 39  56 C2 75 03 E9 2D 00 8B   F.t....9 V.u..-..
4430:  76 FC D1 E6 8B 42 A4 01  46 C0 FF 46 FC C4 5E C0   v....B.. F..F..^.
4440:  26 8A 07 2A E4 01 46 CC  83 7E FC 05 74 03 E9 08   &..*..F. .~..t...
4450:  00 C7 46 FC 00 00 E9 00  00 E9 BD FF B8 00 00 89   ..F..... ........
4460:  46 B2 89 46 FE B8 04 00  2B 46 86 B9 05 00 99 F7   F..F.... +F......
4470:  F9 89 56 AE 8B 46 86 99  F7 F9 89 56 9E E9 79 00   ..V..F.. ...V..y.
4480:  8B 76 FE D1 E6 8B 42 8C  99 01 46 DC 11 56 DE 8B   .v....B. ..F..V..
4490:  76 AE D1 E6 8B 42 A4 01  46 D2 FF 46 AE 8B 76 9E   v....B.. F..F..v.
44A0:  D1 E6 8B 42 A4 01 46 88  FF 46 9E FF 46 FE 83 7E   ...B..F. .F..F..~
44B0:  FE 05 74 03 E9 08 00 C7  46 FE 00 00 E9 00 00 83   ..t..... F.......
44C0:  7E AE 05 74 03 E9 08 00  C7 46 AE 00 00 E9 00 00   ~..t.... .F......
44D0:  83 7E 9E 05 74 03 E9 08  00 C7 46 9E 00 00 E9 00   .~..t... ..F.....
44E0:  00 C4 5E 88 26 8A 07 2A  E4 C4 5E D2 26 8A 0F 2A   ..^.&..* ..^.&..*
44F0:  ED 2B C1 01 46 CC FF 46  B2 8B 46 A0 39 46 B2 7C   .+..F..F ..F.9F.|
4500:  03 E9 2D 01 8B 46 DC 8B  56 DE 8E 06 70 0D 26 03   ..-..F.. V...p.&.
4510:  06 EE 77 83 D2 00 B9 0C  00 D3 E2 26 03 16 F0 77   ..w..... ...&...w
4520:  8E C2 8B D8 26 8A 07 2A  E4 89 46 EC 3D 00 00 75   ....&..* ..F.=..u
4530:  03 E9 13 00 81 7E EC FF  00 75 03 E9 09 00 83 7E   .....~.. .u.....~
4540:  EC 7F 74 03 E9 03 00 E9  36 FF 8B 46 CC 39 46 96   ..t..... 6..F.9F.
4550:  7E 03 E9 B5 00 8B 46 DC  8B 56 DE 8E 06 70 0D 26   ~.....F. .V...p.&
4560:  03 06 EE 77 83 D2 00 B9  0C 00 D3 E2 26 03 16 F0   ...w.... ....&...
4570:  77 8E C2 8B D8 26 C6 07  FF 83 7E BC 00 75 03 E9   w....&.. ..~..u..
4580:  85 00 8E 06 56 0D 26 A1  E6 00 99 52 50 FF 76 DE   ....V.&. ...RP.v.
4590:  FF 76 DC 9A A6 30 AB 10  8E 06 72 0D 26 A3 04 00   .v...0.. ..r.&...
45A0:  8E 06 56 0D 26 A1 E6 00  99 52 50 FF 76 DE FF 76   ..V.&... .RP.v..v
45B0:  DC 9A DA 2F AB 10 8E 06  74 0D 26 A3 06 00 8E 06   .../.... t.&.....
45C0:  72 0D 8B 46 F8 26 39 06  04 00 7F 03 E9 38 00 8B   r..F.&9. .....8..
45D0:  46 EE 26 39 06 04 00 7C  03 E9 2B 00 8E 06 74 0D   F.&9...| ..+...t.
45E0:  8B 46 F0 26 39 06 06 00  7F 03 E9 1A 00 8B 46 EA   .F.&9... ......F.
45F0:  26 39 06 06 00 7C 03 E9  0D 00 C4 5E 14 26 C7 07   &9...|.. ...^.&..
4600:  01 00 C7 46 BC 00 00 E9  24 00 8B 46 DC 8B 56 DE   ...F.... $..F..V.
4610:  8E 06 70 0D 26 03 06 EE  77 83 D2 00 B9 0C 00 D3   ..p.&... w.......
4620:  E2 26 03 16 F0 77 8E C2  8B D8 26 C6 07 00 E9 4F   .&...w.. ..&....O
4630:  FE E9 10 00 0B C0 75 03  E9 34 FC 48 75 03 E9 C9   ......u. .4.Hu...
4640:  FD E9 00 00 E9 1B F9 E9  A6 F5 5E 5F 8B E5 5D CB   ........ ..^_..].
4650:  55 8B EC 81 EC 04 00 57  56 C4 5E 08 26 83 3F 00   U......W V.^.&.?.
4660:  7D 03 E9 72 00 8B 46 06  C4 5E 08 26 2B 07 50 9A   }..r..F. .^.&+.P.
4670:  04 2F AB 10 83 C4 02 89  46 FE 3D 08 00 7F 03 E9   ./...... F.=.....
4680:  09 00 B8 10 00 2B 46 FE  89 46 FE 8B 46 06 C4 5E   .....+F. .F..F..^
4690:  08 26 2B 07 05 08 00 50  9A 04 2F AB 10 83 C4 02   .&+....P ../.....
```

```
46A0:  89 46 FC 3D 08 00 7F 03  E9 09 00 B8 10 00 2B 46   .F.=.... ......+F
46B0:  FC 89 46 FC 8B 46 FE 39  46 FC 7F 03 E9 0C 00 8B   ..F..F.9 F.......
46C0:  46 06 C4 5E 08 26 89 07  E9 0C 00 8B 46 06 05 08   F..^.&.. ....F...
46D0:  00 C4 5E 08 26 89 07 5E  5F 8B E5 5D CB 55 8B EC   ..^.&..^ _..].U..
46E0:  81 EC 02 00 57 56 C7 46  FE FF FF 8B 46 06 E9 BF   ....WV.F ....F...
46F0:  02 C4 5E 0C 26 8B 47 0A  C4 5E 08 26 39 47 0A 7F   ..^.&.G. .^.&9G..
4700:  03 E9 0C 00 8B 46 06 05  08 00 89 46 FE E9 19 00   .....F.. ...F....
4710:  C4 5E 0C 26 8B 47 0A C4  5E 08 26 39 47 0A 7C 03   .^.&.G.. ^.&9G.|.
4720:  E9 06 00 8B 46 06 89 46  FE E9 A4 02 C4 5E 0C 26   ....F..F .....^.&
4730:  8B 47 0A C4 5E 08 26 39  47 0A 7F 03 E9 1F 00 C4   .G..^.&9 G.......
4740:  5E 0C 26 8B 47 0C C4 5E  08 26 39 47 0C 7E 03 E9   ^.&.G..^ .&9G.~..
4750:  0C 00 8B 46 06 05 08 00  89 46 FE E9 2C 00 C4 5E   ...F.... .F..,..^
4760:  0C 26 8B 47 0A C4 5E 08  26 39 47 0A 7C 03 E9 19   .&.G..^. &9G.|...
4770:  00 C4 5E 0C 26 8B 47 0C  C4 5E 08 26 39 47 0C 7D   ..^.&.G. .^.&9G.}
4780:  03 E9 06 00 8B 46 06 89  46 FE E9 43 02 C4 5E 0C   .....F.. F..C..^.
4790:  26 8B 47 0A C4 5E 08 26  39 47 0A 7F 03 E9 1F 00   &.G..^.& 9G......
47A0:  C4 5E 0C 26 8B 47 0C C4  5E 08 26 39 47 0C 7C 03   .^.&.G.. ^.&9G.|.
47B0:  E9 0C 00 8B 46 06 05 08  00 89 46 FE E9 2C 00 C4   ....F... ..F..,..
47C0:  5E 0C 26 8B 47 0A C4 5E  08 26 39 47 0A 7C 03 E9   ^.&.G..^ .&9G.|..
47D0:  19 00 C4 5E 0C 26 8B 47  0C C4 5E 08 26 39 47 0C   ...^.&.G ..^.&9G.
47E0:  7F 03 E9 06 00 8B 46 06  89 46 FE E9 E2 01 C4 5E   ......F. .F.....^
47F0:  0C 26 8B 47 0A C4 5E 08  26 39 47 0A 7D 03 E9 1F   .&.G..^. &9G.}...
4800:  00 C4 5E 0C 26 8B 47 0C  C4 5E 08 26 39 47 0C 7C   ..^.&.G. .^.&9G.|
4810:  03 E9 0C 00 8B 46 06 05  08 00 89 46 FE E9 2C 00   .....F.. ...F..,.
4820:  C4 5E 0C 26 8B 47 0A C4  5E 08 26 39 47 0A 7E 03   .^.&.G.. ^.&9G.~.
4830:  E9 19 00 C4 5E 0C 26 8B  47 0C C4 5E 08 26 39 47   ....^.&. G..^.&9G
4840:  0C 7F 03 E9 06 00 8B 46  06 89 46 FE E9 81 01 C4   .......F ..F.....
4850:  5E 0C 26 8B 47 0C C4 5E  08 26 39 47 0C 7C 03 E9   ^.&.G..^ .&9G.|..
4860:  0C 00 8B 46 06 05 08 00  89 46 FE E9 19 00 C4 5E   ...F.... .F.....^
4870:  0C 26 8B 47 0C C4 5E 08  26 39 47 0C 7F 03 E9 06   .&.G..^. &9G.....
4880:  00 8B 46 06 89 46 FE E9  46 01 C4 5E 0C 26 8B 47   ..F..F.. F..^.&.G
4890:  0A C4 5E 08 26 39 47 0A  7E 03 E9 1F 00 C4 5E 0C   ..^.&9G. ~.....^.
48A0:  26 8B 47 0C C4 5E 08 26  39 47 0C 7C 03 E9 0C 00   &.G..^.& 9G.|....
48B0:  8B 46 06 05 08 00 89 46  FE E9 2C 00 C4 5E 0C 26   .F.....F ..,..^.&
48C0:  8B 47 0A C4 5E 08 26 39  47 0A 7D 03 E9 19 00 C4   .G..^.&9 G.}.....
48D0:  5E 0C 26 8B 47 0C C4 5E  08 26 39 47 0C 7F 03 E9   ^.&.G..^ .&9G....
48E0:  06 00 8B 46 06 89 46 FE  E9 E5 00 C4 5E 0C 26 8B   ...F..F. ....^.&.
48F0:  47 0A C4 5E 08 26 39 47  0A 7C 03 E9 1F 00 C4 5E   G..^.&9G .|.....^
4900:  0C 26 8B 47 0C C4 5E 08  26 39 47 0C 7C 03 E9 0C   .&.G..^. &9G.|...
4910:  00 8B 46 06 05 08 00 89  46 FE E9 2C 00 C4 5E 0C   ..F..... F..,..^.
4920:  26 8B 47 0A C4 5E 08 26  39 47 0A 7F 03 E9 19 00   &.G..^.& 9G......
4930:  C4 5E 0C 26 8B 47 0C C4  5E 08 26 39 47 0C 7F 03   .^.&.G.. ^.&9G...
4940:  E9 06 00 8B 46 06 89 46  FE E9 84 00 C4 5E 0C 26   ....F..F .....^.&
4950:  8B 47 0A C4 5E 08 26 39  47 0A 7C 03 E9 1F 00 C4   .G..^.&9 G.|.....
4960:  5E 0C 26 8B 47 0C C4 5E  08 26 39 47 0C 7E 03 E9   ^.&.G..^ .&9G.~..
4970:  0C 00 8B 46 06 05 08 00  89 46 FE E9 2C 00 C4 5E   ...F.... .F..,..^
4980:  0C 26 8B 47 0A C4 5E 08  26 39 47 0A 7F 03 E9 19   .&.G..^. &9G.....
4990:  00 C4 5E 0C 26 8B 47 0C  C4 5E 08 26 39 47 0C 7D   ..^.&.G. .^.&9G.}
49A0:  03 E9 06 00 8B 46 06 89  46 FE E9 23 00 E9 20 00   .....F.. F..#.. .
49B0:  3D 07 00 76 03 E9 18 00  D1 E0 93 2E FF A7 C0 2A   =..v.... .......*
49C0:  F1 27 2C 28 8D 28 EE 28  4F 29 8A 29 EB 29 4C 2A   .',(.(.( O).).)L*
49D0:  8B 46 FE E9 00 00 5E 5F  8B E5 5D CB 55 8B EC 81   .F....^_ ..].U...
49E0:  EC 24 00 57 56 C4 5E 06  26 8B 47 04 C4 5E 06 26   .$.WV.^. &.G..^.&
49F0:  2B 47 02 05 07 00 89 46  F8 C4 5E 06 26 8B 47 08   +G.....F ..^.&.G.
```

```
EXTRACT.DMP          Thursday, January  6, 1994  12:02pm                Page 23

4A00:  C4 5E 06 26 2B 47 06 05  07 00 89 46 F2 C4 5E 06   .^.&+G.. ...F..^.
4A10:  26 8B 47 02 2D 03 00 89  46 E8 C4 5E 06 26 8B 47   &.G.-... F..^.&.G
4A20:  06 2D 03 00 89 46 E2 83  7E F8 18 7C 03 E9 17 00   .-...F.. ~..|....
4A30:  8B 46 F8 2D 18 00 99 2B  C2 D1 F8 01 46 E8 C7 06   .F.-...+ ....F...
4A40:  B2 22 18 00 E9 06 00 8B  46 F8 A3 B2 22 83 7E F2   .".....  F...".~.
4A50:  18 7C 03 E9 17 00 8B 46  F2 2D 18 00 99 2B C2 D1   .|.....F .-...+..
4A60:  F8 01 46 E2 C7 06 B4 22  18 00 E9 06 00 8B 46 F2   ..F...." ......F.
4A70:  A3 B4 22 A1 B2 22 F7 2E  B4 22 A3 DA 22 C7 06 D4   .."..".. ."..."...
4A80:  0E D8 0E 8C 1E D6 0E 83  7E E8 00 7C 03 E9 05 00   ........ ~..|....
4A90:  C7 46 E8 00 00 8E 06 56  0D 26 A1 E6 00 2B 06 B2   .F.....V .&...+..
4AA0:  22 3B 46 E8 7C 03 E9 0B  00 26 A1 E6 00 2B 06 B2   ";F.|... .&...+..
4AB0:  22 89 46 E8 83 7E E2 00  7C 03 E9 05 00 C7 46 E2   ".F..~.. |.....F.
4AC0:  00 00 8E 06 5A 0D 26 A1  E8 00 2B 06 B4 22 3B 46   ....Z.&. ..+..";F
4AD0:  E2 7C 03 E9 0B 00 26 A1  E8 00 2B 06 B4 22 89 46   .|....&. ..+..".F
4AE0:  E2 8B 46 E8 A3 A8 16 8B  46 E2 A3 AC 16 A1 A8 16   ..F..... F.......
4AF0:  99 8E 06 56 0D 8B C8 26  A1 E6 00 8B DA F7 2E AC   ...V...& ........
4B00:  16 03 C8 13 DA 89 4E EA  89 5E EC A1 D4 0E 8B 16   ......N. .^......
4B10:  D6 0E 89 46 E4 89 56 E6  C7 46 E0 00 00 E9 18 00   ...F..V. .F......
4B20:  FF 46 E0 8E 06 56 0D 26  A1 E6 00 99 01 46 EA 11   .F...V.& .....F..
4B30:  56 EC A1 B2 22 01 46 E4  A1 B4 22 39 46 E0 7C 03   V...".F. .."9F.|.
4B40:  E9 33 00 FF 36 B2 22 8B  46 EA 8B 56 EC 8E 06 70   .3..6.". F..V...p
4B50:  0D 26 03 06 EE 77 83 D2  00 B9 0C 00 D3 E2 26 03   .&...w.. ......&.
4B60:  16 F0 77 52 50 FF 76 E6  FF 76 E4 9A FA 2D AB 10   ..wRP.v. .v...-..
4B70:  83 C4 0A E9 AA FF C7 06  D2 0E 7F 00 C4 5E 12 26   ........ .....^.&
4B80:  FF 37 C4 5E 06 26 FF 77  0C C4 5E 06 26 FF 77 0A   .7.^.&.w ..^.&.w.
4B90:  9A 3E 05 D0 01 83 C4 06  88 46 FA 8A 46 FA 50 9A   .>...... .F..F.P.
4BA0:  4E 09 D0 01 83 C4 02 C4  5E 12 26 89 07 8E 06 54   N....... ^.&....T
4BB0:  0D 26 FF 06 2E 84 C4 5E  12 26 83 3F 00 7C 03 E9   .&.....^ .&.?.|..
4BC0:  5C 00 8E 06 54 0D 26 FF  06 30 84 83 7E 1A 00 75   \...T.&. .0..~..u
4BD0:  03 E9 44 00 C4 5E 06 26  8B 47 0A 89 46 DE C4 5E   ..D..^.& .G..F..^
4BE0:  06 26 8B 47 0C 89 46 DC  8B 46 DE B9 18 00 99 F7   .&.G..F. .F......
4BF0:  F9 8B D0 8B 46 DC 8B DA  99 F7 F9 8B C8 8E 06 58   ....F... .......X
4C00:  0D 26 A1 22 84 F7 E9 03  D8 89 5E F0 8E 06 5E 0D   .&.".... ..^...^.
4C10:  8B 5E F0 26 FE 87 6A 07  B8 FF FF E9 C9 01 C4 5E   .^.&..j. .......^
4C20:  12 26 FF 37 FF 76 08 FF  76 06 9A D1 04 D0 01 83   .&.7.v.. v.......
4C30:  C4 06 FF 76 18 FF 76 16  C4 5E 12 26 FF 37 9A 50   ...v..v. .^.&.7.P
4C40:  27 D0 01 83 C4 06 C4 5E  16 26 83 3F 00 7D 03 E9   '......^ .&.?.}..
4C50:  0A 00 83 3E B0 16 00 7C  03 E9 09 00 C7 06 DE 22   ...>...| ......."
4C60:  00 00 E9 2E 00 C4 5E 16  26 8B 07 2B 06 B0 16 A3   ......^. &..+....
4C70:  DE 22 83 3E DE 22 08 7F  03 E9 08 00 83 2E DE 22   .".>.".. ......."
4C80:  10 E9 0F 00 83 3E DE 22  F8 7C 03 E9 05 00 83 06   .....>." .|......
4C90:  DE 22 10 C4 5E 12 26 8B  07 89 46 FE C4 5E 16 26   ."..^.&. ..F..^.&
4CA0:  8B 07 A3 B0 16 83 7E F8  10 7F 03 E9 14 00 C4 5E   ......~. .......^
4CB0:  06 26 8B 47 02 48 A3 AA  16 8B 46 F8 A3 B6 22 E9   .&.G.H.. ..F...".
4CC0:  18 00 A1 B2 22 2D 10 00  99 2B C2 D1 F8 03 06 A8   ...."-.. .+......
4CD0:  16 A3 AA 16 C7 06 B6 22  10 00 83 7E F2 10 7F 03   ......." ...~....
4CE0:  E9 14 00 C4 5E 06 26 8B  47 06 48 A3 AE 16 8B 46   ....^.&. G.H....F
4CF0:  F2 A3 B8 22 E9 18 00 A1  B4 22 2D 10 00 99 2B C2   ...".... ."-...+.
4D00:  D1 F8 03 06 AC 16 A3 AE  16 C7 06 B8 22 10 00 83   ........ ...."...
4D10:  7E 1A 00 75 03 E9 C9 00  FF 76 18 FF 76 16 FF 76   ~..u.... .v..v..v
4D20:  14 FF 76 12 FF 76 10 FF  76 0E FF 76 0C FF 76 0A   ..v..v.. v..v..v.
4D30:  9A 4F 37 BC 0B 83 C4 10  3D 00 00 75 03 E9 56 00   .O7..... =..u..V.
4D40:  83 3E 9C 05 00 75 03 E9  26 00 FF 76 1E FF 76 1C   .>...u.. &..v..v.
4D50:  FF 76 10 FF 76 0E FF 76  0C FF 76 0A FF 76 FE FF   .v..v..v ..v..v..
```

EXTRACT.DMP Thursday, January 6, 1994 12:02pm Page 24

```
4D60:  76 08 FF 76 06 9A 7F 0B  D0 01 83 C4 12 E9 23 00   v..v.... ......#.
4D70:  FF 76 1E FF 76 1C FF 76  10 FF 76 0E FF 76 0C FF   .v..v..v ..v..v..
4D80:  76 0A FF 76 FE FF 76 08  FF 76 06 9A FF 19 D0 01   v..v..v. .v......
4D90:  83 C4 12 E9 4B 00 83 3E  9C 05 00 75 03 E9 22 00   ....K..> ...u..".
4DA0:  FF 76 1E FF 76 1C 2B C0  50 50 2B C0 50 50 FF 76   .v..v.+. PP+.PP.v
4DB0:  FE FF 76 08 FF 76 06 9A  7F 0B D0 01 83 C4 12 E9   ..v..v.. ........
4DC0:  1F 00 FF 76 1E FF 76 1C  2B C0 50 50 2B C0 50 50   ...v..v. +.PP+.PP
4DD0:  FF 76 FE FF 76 08 FF 76  06 9A FF 19 D0 01 83 C4   .v..v..v ........
4DE0:  12 B8 00 00 E9 00 00 5E  5F 8B E5 5D CB 55 8B EC   .......^ _..].U..
4DF0:  81 EC 04 00 57 56 A1 B2  22 2B 46 06 48 3B 46 06   ....WV.. "+F.H;F.
4E00:  7F 03 E9 03 00 8B 46 06  89 46 FE A1 B4 22 2B 46   ......F. .F..."+F
4E10:  08 48 3B 46 08 7F 03 E9  03 00 8B 46 08 89 46 FC   .H;F.... ...F..F.
4E20:  8B 46 0A E9 46 00 8B 46  FE E9 60 00 8B 46 FC E9   .F..F..F ..`..F..
4E30:  5A 00 8B 46 FC 3B 46 FE  7F 03 E9 03 00 8B 46 FE   Z..F.;F. ......F.
4E40:  E9 49 00 8B 46 FC D1 E0  3B 46 FE 7F 03 E9 03 00   .I..F... ;F......
4E50:  8B 46 FE E9 36 00 8B 46  FE D1 E0 3B 46 FC 7F 03   .F..6..F ...;F...
4E60:  E9 03 00 8B 46 FC E9 23  00 E9 20 00 3D 07 00 76   ....F..# .. .=..v
4E70:  03 E9 18 00 D1 E0 93 2E  FF A7 7C 2F 26 2F 43 2F   ........ ..|/&/C/
4E80:  32 2F 56 2F 2C 2F 56 2F  32 2F 43 2F 5E 5F 8B E5   2/V/,/V/ 2/C/^_..
4E90:  5D CB 55 8B EC 81 EC 00  00 57 56 5E 5F 8B E5 5D   ].U..... .WV^_..]
4EA0:  CB 55 8B EC 81 EC 06 00  57 56 C7 46 FC 00 00 C7   .U...... WV.F....
4EB0:  46 FE 00 08 9A C9 01 D0  01 9A 00 00 D0 01 83 3E   F....... .......>
4EC0:  6C 06 00 74 03 E9 05 00  9A 83 00 C9 04 9A 8B 02   l..t.... ........
4ED0:  C9 04 9A 81 0A C9 04 89  46 FA 83 3E 70 06 00 75   ........ F..>p..u
4EE0:  03 E9 05 00 9A E4 10 C9  04 83 7E FA 00 75 03 E9   ........ ..~..u..
4EF0:  06 00 8B 46 FA E9 15 00  83 3E 6C 06 00 75 03 E9   ...F.... .>l..u..
4F00:  05 00 9A A3 16 C9 04 B8  00 00 E9 00 00 5E 5F 8B   ........ .....^_.
4F10:  E5 5D CB 55 8B EC 81 EC  04 00 57 56 8E 06 76 0D   .].U.... ..WV..v.
4F20:  26 A1 E8 00 8E 06 78 0D  26 F7 2E E6 00 89 46 FC   &.....x. &.....F.
4F30:  89 56 FE 83 6E FC 01 83  5E FE 00 8B 46 FE 0B 46   .V..n... ^...F..F
4F40:  FC 75 03 E9 94 00 8B 46  FC 8B 56 FE 8E 06 7A 0D   .u.....F ..V...z.
4F50:  26 03 06 EE 77 83 D2 00  B9 0C 00 D3 E2 26 03 16   &...w... .....&..
4F60:  F0 77 8E C2 8B D8 26 8A  07 2A E4 E9 4F 00 8B 46   .w....&. .*..O..F
4F70:  FC 8B 56 FE 8E 06 7A 0D  26 03 06 EE 77 83 D2 00   ..V...z. &...w...
4F80:  B9 0C 00 D3 E2 26 03 16  F0 77 8E C2 8B D8 26 FE   .....&.. .w....&.
4F90:  07 E9 43 00 8B 46 FC 8B  56 FE 8E 06 7A 0D 26 03   ..C..F.. V...z.&.
4FA0:  06 EE 77 83 D2 00 B9 0C  00 D3 E2 26 03 16 F0 77   ..w..... ...&...w
4FB0:  8E C2 8B D8 26 FE 0F E9  1D 00 E9 1A 00 0B C0 75   ....&... .......u
4FC0:  03 E9 AA FF 2D 7F 00 75  03 E9 A2 FF 2D 80 00 75   ....-..u ....-..u
4FD0:  03 E9 C0 FF E9 00 00 E9  59 FF 5E 5F 8B E5 5D CB   ........ Y.^_..].
4FE0:  55 8B EC 81 EC 0E 00 57  56 8E 06 78 0D 26 A1 E6   U......W V..x.&..
4FF0:  00 48 89 46 FA 8E 06 76  0D 26 A1 E8 00 48 89 46   .H.F...v .&...H.F
5000:  FC C7 46 FE 04 00 2B C0  89 46 F8 89 46 F6 C7 46   ..F...+. .F..F..F
5010:  F4 00 00 E9 03 00 FF 46  F4 8B 46 FA F7 6E FE 3B   .......F ..F..n.;
5020:  46 F4 7F 03 E9 2F 00 8B  46 F6 8B 56 F8 8E 06 7A   F..../.. F..V...z
5030:  0D 26 03 06 EE 77 83 D2  00 B9 0C 00 D3 E2 26 03   .&...w.. ......&.
5040:  16 F0 77 8E C2 8B D8 26  C6 07 00 83 46 F6 01 83   ..w....& ....F...
5050:  56 F8 00 E9 C0 FF 8B 46  FE 48 89 46 F4 E9 03 00   V......F .H.F....
5060:  FF 46 F4 8B 46 FC 2B 46  FE 3B 46 F4 7F 03 E9 5C   .F..F.+F .;F....\
5070:  00 C7 46 F2 00 00 E9 03  00 FF 46 F2 8B 46 FE D1   ..F..... ..F..F..
5080:  E0 3B 46 F2 7F 03 E9 2F  00 8B 46 F6 8B 56 F8 8E   .;F..../ ..F..V..
5090:  06 7A 0D 26 03 06 EE 77  83 D2 00 B9 0C 00 D3 E2   .z.&...w ........
50A0:  26 03 16 F0 77 8E C2 8B  D8 26 C6 07 00 83 46 F6   &...w... .&....F.
50B0:  01 83 56 F8 00 E9 C1 FF  8B 46 FA 8B 4E FE D1 E1   ..V..... .F..N...
```

```
50C0:  2B C1 40 99 01 46 F6 11  56 F8 E9 93 FF C7 46 F4   +.@..F.. V.....F.
50D0:  00 00 E9 03 00 FF 46 F4  8B 46 FA F7 6E FE 3B 46   ......F. .F..n.;F
50E0:  F4 7F 03 E9 2F 00 8B 46  F6 8B 56 F8 8E 06 7A 0D   ..../..F ..V...z.
50F0:  26 03 06 EE 77 83 D2 00  B9 0C 00 D3 E2 26 03 16   &...w... .....&..
5100:  F0 77 8E C2 8B D8 26 C6  07 00 83 46 F6 01 83 56   .w....&. ...F...V
5110:  F8 00 E9 C0 FF 5E 5F 8B  E5 5D CB 55 8B EC 81 EC   .....^_. .].U....
5120:  32 00 57 56 8E 06 78 0D  26 A1 E6 00 99 33 C2 2B   2.WV..x. &....3.+
5130:  C2 B9 03 00 D3 F8 33 C2  2B C2 89 46 D2 8E 06 76   ......3. +..F...v
5140:  0D 26 A1 E8 00 99 33 C2  2B C2 B9 03 00 D3 F8 33   .&....3. +......3
5150:  C2 2B C2 89 46 FE C7 46  D4 40 00 8E 06 78 0D 26   .+..F..F .@...x.&
5160:  A1 E6 00 8B C8 D1 E0 03  C1 D1 E0 03 C1 89 46 FC   ........ ......F.
5170:  2B C0 89 46 F8 89 46 F6  B8 00 00 89 46 D8 89 46   +..F..F. ....F..F
5180:  E4 E9 03 00 FF 46 D8 8B  46 D8 39 46 FE 7F 03 E9   .....F.. F.9F....
5190:  C4 00 C7 46 DA 00 00 E9  03 00 FF 46 DA 8B 46 DA   ...F.... ...F..F.
51A0:  39 46 D2 7F 03 E9 A1 00  8B 46 F6 8B 56 F8 89 46   9F...... .F..V..F
51B0:  EE 89 56 F0 B8 00 00 89  46 DE 89 46 FA E9 03 00   ..V..... F..F....
51C0:  FF 46 DE 83 7E DE 08 7C  03 E9 5C 00 C7 46 DC 00   .F..~..| ..\..F..
51D0:  00 E9 03 00 FF 46 DC 83  7E DC 08 7C 03 E9 33 00   .....F.. ~..|..3.
51E0:  8B 46 EE 8B 56 F0 8E 06  7A 0D 26 03 06 EE 77 83   .F..V... z.&...w.
51F0:  D2 00 B9 0C 00 D3 E2 26  03 16 F0 77 8E C2 8B D8   .......& ...w....
5200:  26 8A 07 2A E4 01 46 FA  83 46 EE 01 83 56 F0 00   &..*..F. .F...V..
5210:  E9 C1 FF 8E 06 78 0D 26  A1 E6 00 2D 08 00 99 01   .....x.& ...-....
5220:  46 EE 11 56 F0 E9 98 FF  8B 46 FA 99 F7 7E D4 8E   F..V.... .F...~..
5230:  06 7C 0D 8B 5E E4 26 88  87 F2 E9 83 46 F6 08 83   .|..^.&. ....F...
5240:  56 F8 00 FF 46 E4 E9 51  FF 8B 46 FC 99 01 46 F6   V...F..Q ..F...F.
5250:  11 56 F8 E9 2E FF C7 46  F2 E2 42 8C 5E F4 C7 46   .V.....F ..B.^..F
5260:  E6 66 43 8C 5E E8 C7 46  E0 EA 43 8C 5E E2 C7 46   .fC.^..F ..C.^..F
5270:  D4 09 00 8E 06 7C 0D 26  A0 F2 E9 2A E4 C4 5E E6   .....|.& ...*..^.
5280:  26 89 07 8E 06 7C 0D 8B  5E D2 26 8A 87 F1 E9 2A   &....|.. ^.&....*
5290:  E4 8B 76 D2 D1 E6 C4 5E  E6 26 89 40 02 C7 46 E4   ..v....^ .&.@..F.
52A0:  01 00 E9 03 00 FF 46 E4  8B 46 D2 39 46 E4 7E 03   ......F. .F.9F.~.
52B0:  E9 32 00 8E 06 7C 0D 8B  5E E4 26 8A 87 F1 E9 2A   .2...|.. ^.&....*
52C0:  E4 8B 5E E4 D1 E3 C4 76  E6 26 89 00 8B 5E E4 D1   ..^....v .&...^..
52D0:  E3 C4 76 E6 26 8B 00 8B  5E E4 D1 E3 C4 76 E0 26   ..v.&... ^....v.&
52E0:  89 00 E9 C0 FF C7 46 DE  00 00 E9 03 00 FF 46 DE   ......F. ......F.
52F0:  8B 46 FE 39 46 DE 7C 03  E9 34 01 8B 46 F2 8B 56   .F.9F.|. .4..F..V
5300:  F4 89 46 EA 89 56 EC 8B  46 E6 8B 56 E8 89 46 F2   ..F..V.. F..V..F.
5310:  89 56 F4 8B 46 E0 8B 56  E2 89 46 E6 89 56 E8 8B   .V..F..V ..F..V..
5320:  46 EA 8B 56 EC 89 46 E0  89 56 E2 8B 46 FE 48 3B   F..V..F. .V..F.H;
5330:  46 DE 7F 03 E9 0A 00 8B  46 DE 40 89 46 D6 E9 07   F....... F.@.F...
5340:  00 8B 46 FE 48 89 46 D6  C7 46 E4 01 00 E9 03 00   ..F.H.F. .F......
5350:  FF 46 E4 8B 46 D2 39 46  E4 7E 03 E9 24 00 8B 46   .F..F.9F .~..$..F
5360:  D6 F7 6E D2 8B D8 03 5E  E4 8E 06 7C 0D 26 8A 87   ..n....^ ...|.&..
5370:  F1 E9 2A E4 8B 5E E4 D1  E3 C4 76 E0 26 89 00 E9   ..*..^.. ..v.&...
5380:  CE FF C4 5E E0 26 8B 47  02 C4 5E E0 26 89 07 8B   ...^.&.G ..^.&...
5390:  5E D2 D1 E3 C4 76 E0 26  8B 00 8B 76 D2 D1 E6 C4   ^....v.& ...v....
53A0:  5E E0 26 89 40 02 C7 46  E4 00 00 E9 03 00 FF 46   ^.&.@..F .......F
53B0:  E4 8B 46 D2 39 46 E4 7C  03 E9 70 00 8B 46 E4 89   ..F.9F.| ..p..F..
53C0:  46 D6 C7 46 FA 00 00 E9  03 00 FF 46 D6 8B 46 E4   F..F.... ...F..F.
53D0:  05 03 00 3B 46 D6 7F 03  E9 29 00 8B 5E D6 D1 E3   ...;F... .)..^...
53E0:  C4 76 F2 26 8B 00 8B 5E  D6 D1 E3 C4 76 E6 26 8B   .v.&...^ ....v.&.
53F0:  08 8B 5E D6 D1 E3 C4 76  E0 26 03 08 03 C1 01 46   ..^....v .&.....F
5400:  FA E9 C6 FF 8B 46 D4 99  2B C2 D1 F8 03 46 FA 99   .....F.. +....F..
5410:  F7 7E D4 8B C8 8B 46 DE  F7 6E D2 8B D8 03 5E E4   .~....F. .n....^.
```

```
5420:  8E 06 7C 0D 26 88 8F F2  E9 E9 82 FF E9 BE FE B8   ..|.&... ........
5430:  00 00 89 46 D8 89 46 E4  E9 03 00 FF 46 D8 8B 46   ...F..F. ....F..F
5440:  D8 39 46 FE 7F 03 E9 FC  00 C7 46 DA 00 00 E9 03   .9F..... ..F.....
5450:  00 FF 46 DA 8B 46 DA 39  46 D2 7F 03 E9 E3 00 8E   ..F..F.9 F.......
5460:  06 78 0D 26 A1 E6 00 F7  6E D8 D1 E0 D1 D2 D1 E0   .x.&.... n.......
5470:  D1 D2 D1 E0 D1 D2 8B C8  8B 46 DA 8B D9 B1 03 D3   ........ .F......
5480:  E0 8B F2 99 03 C3 13 D6  89 46 F6 89 56 F8 C7 46   ........ .F..V..F
5490:  FA 00 00 8E 06 7C 0D 8B  5E E4 26 8A 87 F2 E9 2A   .....|.. ^.&....*
54A0:  E4 89 46 FC C7 46 DE 00  00 E9 03 00 FF 46 DE 83   ..F..F.. .....F..
54B0:  7E DE 08 7C 03 E9 6A 00  C7 46 DC 00 00 E9 03 00   ~..|..j. .F......
54C0:  FF 46 DC 83 7E DC 08 7C  03 E9 41 00 8B 46 F6 8B   .F..~..| ..A..F..
54D0:  56 F8 83 46 F6 01 83 56  F8 00 8E 06 7A 0D 26 03   V..F...V ....z.&.
54E0:  06 EE 77 83 D2 00 B9 0C  00 D3 E2 26 03 16 F0 77   ..w..... ...&...w
54F0:  8E C2 8B D8 26 8A 07 2A  E4 2B 46 FC F7 D8 50 9A   ....&..* .+F...P.
5500:  04 2F AB 10 83 C4 02 01  46 FA E9 B3 FF 8E 06 78   ./...... F......x
5510:  0D 26 A1 E6 00 2D 08 00  99 01 46 F6 11 56 F8 E9   .&...-.. ..F..V..
5520:  8A FF 8B 46 FA 99 33 C2  2B C2 B9 03 00 D3 F8 33   ...F..3. +......3
5530:  C2 2B C2 8B 5E E4 D1 E3  89 87 E2 22 FF 46 E4 E9   .+..^... ...".F..
5540:  0F FF E9 F6 FE E9 00 00  5E 5F 8B E5 5D CB 55 8B   ........ ^_..].U.
5550:  EC 81 EC 16 00 57 56 8E  06 78 0D 26 A1 E6 00 99   .....WV. .x.&....
5560:  33 C2 2B C2 B9 03 00 D3  F8 33 C2 2B C2 89 46 EA   3.+..... .3.+..F.
5570:  8E 06 76 0D 26 A1 E8 00  99 33 C2 2B C2 B9 03 00   ..v.&... .3.+....
5580:  D3 F8 33 C2 2B C2 89 46  FE C7 46 F2 00 00 E9 03   ..3.+..F ..F.....
5590:  00 FF 46 F2 81 7E F2 A0  00 7C 03 E9 0E 00 8B 5E   ..F..~.. .|.....^
55A0:  F2 D1 E3 C7 87 AE 45 00  00 E9 E5 FF C7 46 F4 00   ......E. .....F..
55B0:  00 E9 03 00 FF 46 F4 8B  46 EA F7 6E FE 3B 46 F4   .....F.. F..n.;F.
55C0:  7F 03 E9 22 00 8B 5E F4  D1 E3 8B 87 E2 22 89 46   ..."..^. ....."..F
55D0:  F2 81 7E F2 A0 00 7C 03  E9 09 00 8B 5E F2 D1 E3   ..~...|. ....^...
55E0:  FF 87 AE 45 E9 CD FF 83  3E 6E 06 00 7F 03 E9 42   ...E.... >n.....B
55F0:  00 8B 46 EA F7 6E FE F7  2E 6E 06 B9 64 00 99 F7   ..F..n.. .n..d...
5600:  F9 89 46 FC C7 46 F2 00  00 E9 03 00 FF 46 F2 83   ..F..F.. .....F..
5610:  7E FC 00 7F 03 E9 0F 00  8B 5E F2 D1 E3 8B 87 AE   ~....... .^......
5620:  45 29 46 FC E9 E5 FF 8B  46 F2 C4 5E 06 26 89 07   E)F..... F..^.&..
5630:  E9 F6 01 A1 AE 45 89 46  FA C7 46 F2 00 00 E9 03   .....E.F ..F.....
5640:  00 FF 46 F2 83 7E F2 04  7C 03 E9 0F 00 8B 5E F2   ..F..~.. |.....^.
5650:  D1 E3 8B 87 AE 45 01 46  FA E9 E5 FF C7 46 F2 02   .....E.F .....F..
5660:  00 E9 03 00 FF 46 F2 81  7E F2 9E 00 7C 03 E9 24   .....F.. ~...|..$
5670:  00 8B 5E F2 D1 E3 8B 87  B2 45 8B 5E F2 D1 E3 2B   ..^..... .E.^...+
5680:  87 AA 45 01 46 FA 8B 46  FA 8B 5E F2 D1 E3 89 87   ..E.F..F ..^.....
5690:  6E 44 E9 CF FF C7 46 EC  00 00 C7 46 EE 00 00 C7   nD....F. ...F....
56A0:  46 F2 02 00 E9 03 00 FF  46 F2 81 7E F2 9E 00 7C   F....... F..~...|
56B0:  03 E9 3D 00 8B 5E F2 D1  E3 8B 87 6E 44 89 46 FA   ..=..^.. ...nD.F.
56C0:  8B 46 FA 3B 46 EE 7C 03  E9 03 00 8B 46 EE 89 46   .F.;F.|. ....F..F
56D0:  EE 8B 46 EE 8B 5E F2 D1  E3 2B 87 70 44 3D 0A 00   ..F..^.. .+.pD=..
56E0:  7F 03 E9 09 00 8B 46 F2  89 46 EC E9 03 00 E9 B6   ......F. .F......
56F0:  FF C7 46 F8 00 00 C7 46  F2 02 00 E9 03 00 FF 46   ..F....F .......F
5700:  F2 81 7E F2 9E 00 7C 03  E9 0F 00 8B 5E F2 D1 E3   ..~...|. ....^...
5710:  8B 87 6E 44 01 46 F8 E9  E4 FF B9 9C 00 8B 46 F8   ..nD.F.. ......F.
5720:  2B D2 F7 F1 89 46 F8 8B  46 EA F7 6E FE 8B C8 D1   +....F.. F..n....
5730:  E0 D1 E0 03 C1 99 2B C2  D1 F8 89 46 FC 8B 46 EE   ......+. ...F..F.
5740:  89 46 F0 C7 46 F6 00 00  8B 46 EC 89 46 F2 E9 03   .F..F... .F..F...
5750:  00 FF 46 F2 81 7E F2 9E  00 7C 03 E9 CB 00 8B 5E   ..F..~.. .|.....^
5760:  F2 D1 E3 8B 87 6E 44 89  46 FA 8B 46 FA 3B 46 F0   .....nD. F..F.;F.
5770:  7F 03 E9 03 00 8B 46 F0  89 46 F0 A1 6E 06 E9 95   ......F. .F..n...
```

```
5780:  00 8B 5E F2 D1 E3 8B 46  F8 39 87 6E 44 73 03 E9   ..^....F .9.nDs..
5790:  14 00 8B 5E F2 D1 E3 8B  87 70 44 2B 46 F0 3D 0A   ...^.... .pD+F.=.
57A0:  00 7F 03 E9 0C 00 8B 46  F2 C4 5E 06 26 89 07 E9   .......F ..^.&...
57B0:  77 00 E9 71 00 8B 5E F2  D1 E3 8B 87 6E 44 29 46   w..q..^. ....nD)F
57C0:  FC 8B 5E F2 D1 E3 8B 46  F8 39 87 6E 44 72 03 E9   ..^....F .9.nDr..
57D0:  06 00 8B 46 F2 89 46 F6  8B 5E F2 D1 E3 8B 87 70   ...F..F. .^.....p
57E0:  44 2B 46 F0 3D 0A 00 7F  03 E9 0F 00 8B 46 F2 C4   D+F.=... .....F..
57F0:  5E 06 26 89 07 E9 31 00  E9 15 00 83 7E FC 00 7C   ^.&...1. ....~..|
5800:  03 E9 0C 00 8B 46 F6 C4  5E 06 26 89 07 E9 19 00   .....F.. ^.&.....
5810:  E9 13 00 E9 10 00 40 40  75 03 E9 64 FF 48 75 03   ......@@ u..d.Hu.
5820:  E9 92 FF E9 00 00 E9 28  FF 5E 5F 8B E5 5D CB 55   .......( .^_..].U
5830:  8B EC 81 EC 0A 00 57 56  8E 06 78 0D 26 A1 E6 00   ......WV ..x.&...
5840:  99 33 C2 2B C2 B9 03 00  D3 F8 33 C2 2B C2 89 46   .3.+.... ..3.+..F
5850:  F6 8E 06 76 0D 26 A1 E8  00 99 33 C2 2B C2 B9 03   ...v.&.. ..3.+...
5860:  00 D3 F8 33 C2 2B C2 89  46 FE C7 46 FA 00 00 E9   ...3.+.. F..F....
5870:  03 00 FF 46 FA 81 7E FA  A0 00 7C 03 E9 0E 00 8B   ...F..~. ..|.....
5880:  5E FA D1 E3 C7 87 EE 46  00 00 E9 E5 FF C7 46 FA   ^......F ......F.
5890:  00 00 E9 03 00 FF 46 FA  8B 46 FE F7 6E F6 3B 46   ......F. .F..n.;F
58A0:  FA 7F 03 E9 22 00 8B 5E  FA D1 E3 8B 87 E2 22 89   ...."..^ ......".
58B0:  46 F8 81 7E F8 A0 00 7C  03 E9 09 00 8B 5E F8 D1   F..~...| .....^..
58C0:  E3 FF 87 EE 46 E9 CD FF  8B 46 FE F7 6E F6 99 33   ....F... .F..n..3
58D0:  C2 2B C2 B9 02 00 D3 F8  33 C2 2B C2 89 46 FC C7   .+...... 3.+..F..
58E0:  46 F8 00 00 E9 03 00 FF  46 F8 83 7E FC 00 7F 03   F....... F..~....
58F0:  E9 0F 00 8B 5E F8 D1 E3  8B 87 EE 46 29 46 FC E9   ....^... ...F)F..
5900:  E5 FF 8B 46 F8 C4 5E 06  26 89 07 5E 5F 8B E5 5D   ...F..^. &..^_..]
5910:  CB 55 8B EC 81 EC 24 00  57 56 8E 06 78 0D 26 A1   .U....$. WV..x.&.
5920:  E6 00 99 33 C2 2B C2 B9  03 00 D3 F8 33 C2 2B C2   ...3.+.. ....3.+.
5930:  89 46 DE 8E 06 76 0D 26  A1 E8 00 99 33 C2 2B C2   .F...v.& ....3.+.
5940:  B9 03 00 D3 F8 33 C2 2B  C2 89 46 FE A0 6B 06 2A   .....3.+ ..F..k.*
5950:  E4 89 46 F8 8D 46 F8 16  50 9A BE 06 C9 04 83 C4   ..F..F.. P.......
5960:  04 B8 00 00 89 46 E2 89  46 EE E9 0C 00 FF 46 E2   .....F.. F.....F.
5970:  8B 46 E2 F7 6E DE 89 46  EE 8B 46 E2 39 46 FE 7F   .F..n..F ..F.9F..
5980:  03 E9 97 00 8B 46 DE 99  2B C2 D1 F8 8B 5E E2 D1   .....F.. +....^..
5990:  E3 89 87 2E 48 C7 46 E4  00 00 E9 06 00 FF 46 E4   ....H.F. ......F.
59A0:  FF 46 EE 8B 46 DE 99 2B  C2 D1 F8 3B 46 E4 7D 03   .F..F..+ ...;F.}.
59B0:  E9 65 00 8B 5E EE 89 5E  EA D1 E3 8B 46 F8 39 87   .e..^..^ ....F.9.
59C0:  E2 22 7F 03 E9 4E 00 FF  46 EA 8B 5E EA D1 E3 8B   ."...N.. F..^....
59D0:  46 F8 39 87 E2 22 7F 03  E9 3A 00 FF 46 EA 8B 5E   F.9..".. .:..F..^
59E0:  EA D1 E3 8B 46 F8 39 87  E2 22 7F 03 E9 26 00 FF   ....F.9. ."...&..
59F0:  46 EA 8B 5E EA D1 E3 8B  46 F8 39 87 E2 22 7F 03   F..^.... F.9.."..
5A00:  E9 12 00 A1 72 06 03 46  E4 8B 5E E2 D1 E3 89 87   ....r..F ..^.....
5A10:  2E 48 E9 03 00 E9 85 FF  E9 52 FF C7 46 E2 00 00   .H...... .R..F...
5A20:  8B 46 DE 48 89 46 EE E9  0E 00 FF 46 E2 8B 46 E2   .F.H.F.. ...F..F.
5A30:  40 F7 6E DE 48 89 46 EE  8B 46 E2 39 46 FE 7F 03   @.n.H.F. .F.9F...
5A40:  E9 9A 00 8B 46 DE 99 2B  C2 D1 F8 8B 5E E2 D1 E3   ....F..+ ....^...
5A50:  89 87 2E 49 8B 46 DE 48  89 46 E4 E9 06 00 FF 4E   ...I.F.H .F.....N
5A60:  E4 FF 4E EE 8B 46 DE 99  2B C2 D1 F8 3B 46 E4 7C   ..N..F.. +...;F.|
5A70:  03 E9 66 00 8B 5E EE 89  5E EA D1 E3 8B 46 F8 39   ..f..^.. ^....F.9
5A80:  87 E2 22 7F 03 E9 4F 00  FF 4E EA 8B 5E EA D1 E3   .."...O. .N..^...
5A90:  8B 46 F8 39 87 E2 22 7F  03 E9 3B 00 FF 4E EA 8B   .F.9..". ..;..N..
5AA0:  5E EA D1 E3 8B 46 F8 39  87 E2 22 7F 03 E9 27 00   ^....F.9 .."...'.
5AB0:  FF 4E EA 8B 5E EA D1 E3  8B 46 F8 39 87 E2 22 7F   .N..^... .F.9..".
5AC0:  03 E9 13 00 8B 46 E4 2B  06 72 06 8B 5E E2 D1 E3   .....F.+ .r..^...
5AD0:  89 87 2E 49 E9 03 00 E9  84 FF E9 4D FF B8 00 00   ...I.... ...M....
```

```
5AE0:  89 46 E4 89 46 EE E9 09  00 FF 46 E4 8B 46 E4 89   .F..F... ..F..F..
5AF0:  46 EE 8B 46 E4 39 46 DE  7F 03 E9 A3 00 8B 46 FE   F..F.9F. ......F.
5B00:  99 2B C2 D1 F8 8B 5E E4  D1 E3 89 87 AE 48 C7 46   .+....^. .....H.F
5B10:  E2 00 00 E9 09 00 FF 46  E2 8B 46 DE 01 46 EE 8B   .......F ..F..F..
5B20:  46 FE 99 2B C2 D1 F8 3B  46 E2 7D 03 E9 6E 00 8B   F..+...; F.}..n..
5B30:  5E EE 89 5E EA D1 E3 8B  46 F8 39 87 E2 22 7F 03   ^..^.... F.9.."..
5B40:  E9 57 00 8B 46 DE 01 46  EA 8B 5E EA D1 E3 8B 46   .W..F..F ..^....F
5B50:  F8 39 87 E2 22 7F 03 E9  40 00 8B 46 DE 01 46 EA   .9.."... @..F..F.
5B60:  8B 5E EA D1 E3 8B 46 F8  39 87 E2 22 7F 03 E9 29   .^....F. 9.."...)
5B70:  00 8B 46 DE 01 46 EA 8B  5E EA D1 E3 8B 46 F8 39   ..F..F.. ^....F.9
5B80:  87 E2 22 7F 03 E9 12 00  A1 72 06 03 46 E2 8B 5E   ..".....  .r..F..^
5B90:  E4 D1 E3 89 87 AE 48 E9  03 00 E9 79 FF E9 49 FF   ......H. ...y..I.
5BA0:  C7 46 E4 00 00 8B 46 FE  48 F7 6E DE 89 46 EE E9   .F....F. H.n..F..
5BB0:  10 00 8B 46 FE 48 F7 6E  DE FF 46 E4 03 46 E4 89   ...F.H.n ..F..F..
5BC0:  46 EE 8B 46 E4 39 46 DE  7F 03 E9 A6 00 8B 46 FE   F..F.9F. ......F.
5BD0:  99 2B C2 D1 F8 8B 5E E4  D1 E3 89 87 AE 49 8B 46   .+....^. .....I.F
5BE0:  FE 48 89 46 E2 E9 09 00  FF 4E E2 8B 46 DE 29 46   .H.F.... .N..F.)F
5BF0:  EE 8B 46 FE 99 2B C2 D1  F8 3B 46 E2 7E 03 E9 6F   ..F..+.. .;F.~..o
5C00:  00 8B 5E EE 89 5E EA D1  E3 8B 46 F8 39 87 E2 22   ..^..^.. ..F.9.."
5C10:  7F 03 E9 58 00 8B 46 DE  29 46 EA 8B 5E EA D1 E3   ...X..F. )F..^...
5C20:  8B 46 F8 39 87 E2 22 7F  03 E9 41 00 8B 46 DE 29   .F.9..". ..A..F.)
5C30:  46 EA 8B 5E EA D1 E3 8B  46 F8 39 87 E2 22 7F 03   F..^.... F.9.."..
5C40:  E9 2A 00 8B 46 DE 29 46  EA 8B 5E EA D1 E3 8B 46   .*..F.)F ..^....F
5C50:  F8 39 87 E2 22 7F 03 E9  13 00 8B 46 E2 2B 06 72   .9.."... ...F.+.r
5C60:  06 8B 5E E4 D1 E3 89 87  AE 49 E9 03 00 E9 78 FF   ..^..... .I....x.
5C70:  E9 3F FF C7 46 F6 00 00  E9 03 00 FF 46 F6 83 7E   .?..F... ....F..~
5C80:  F6 04 7C 03 E9 31 01 8B  46 F6 B9 02 00 99 F7 F9   ..|..1.. F.......
5C90:  83 FA 00 74 03 E9 09 00  8B 46 FE 89 46 F0 E9 06   ...t.... .F..F...
5CA0:  00 8B 46 DE 89 46 F0 8B  46 F0 99 33 C2 2B C2 B9   ..F..F.. F..3.+..
5CB0:  02 00 D3 F8 33 C2 2B C2  99 2B C2 D1 F8 89 46 E0   ....3.+. .+....F.
5CC0:  8B 46 E0 89 46 E6 E9 03  00 FF 46 E6 8B 46 F0 2B   .F..F... ..F..F.+
5CD0:  46 E0 3B 46 E6 7F 03 E9  7A 00 B1 06 8B 5E F6 D3   F.;F.... z....^..
5CE0:  E3 03 5E E6 D1 E3 8B 87  2E 48 89 46 FA C7 46 EE   ..^..... .H.F..F.
5CF0:  01 00 E9 03 00 FF 46 EE  8B 46 EE 39 46 E0 7D 03   ......F. .F.9F.}.
5D00:  E9 2A 00 B1 06 8B 5E F6  D3 E3 03 5E E6 03 5E EE   .*....^. ...^..^.
5D10:  D1 E3 8B 87 2E 48 8B 5E  F6 D3 E3 2B 5E EE 03 5E   .....H.^ ...+^..^
5D20:  E6 D1 E3 03 87 2E 48 01  46 FA E9 C8 FF 8B 46 FA   ......H. F.....F.
5D30:  03 46 E0 8B 4E E0 D1 E1  41 99 F7 F9 8E 06 7E 0D   .F..N... A.....~.
5D40:  B1 06 8B 5E F6 D3 E3 03  5E E6 D1 E3 26 89 87 1A   ...^.... ^...&...
5D50:  00 E9 75 FF C7 46 E6 00  00 E9 03 00 FF 46 E6 8B   ..u..F.. .....F..
5D60:  46 E6 39 46 E0 7F 03 E9  4B 00 8E 06 7E 0D B1 06   F.9F.... K...~...
5D70:  8B 5E F6 D3 E3 03 5E E0  D1 E3 26 8B 87 1A 00 8B   .^....^. ..&.....
5D80:  5E F6 D3 E3 03 5E E6 D1  E3 26 89 87 1A 00 8B 5E   ^....^.. .&.....^
5D90:  F6 D3 E3 2B 5E E0 03 5E  F0 D1 E3 26 8B 87 18 00   ...+^..^ ...&....
5DA0:  8B 5E F6 D3 E3 2B 5E E6  03 5E F0 D1 E3 26 89 87   .^...+^. .^...&..
5DB0:  18 00 E9 A7 FF E9 C3 FE  C7 46 DC 00 00 C7 46 E2   ........ .F....F.
5DC0:  00 00 E9 03 00 FF 46 E2  8B 46 E2 39 46 FE 7F 03   ......F. .F.9F...
5DD0:  E9 06 01 C7 46 E4 00 00  E9 03 00 FF 46 E4 8B 46   ....F... ....F..F
5DE0:  E4 39 46 DE 7F 03 E9 ED  00 8E 06 7E 0D 8B 5E E2   .9F..... ...~..^.
5DF0:  D1 E3 8B 46 E4 26 39 87  1A 00 7E 03 E9 36 00 8B   ...F.&9. ..~..6..
5E00:  5E E2 D1 E3 8B 46 E4 26  39 87 1A 01 7D 03 E9 24   ^....F.& 9...}..$
5E10:  00 8B 5E E4 D1 E3 8B 46  E2 26 39 87 9A 00 7E 03   ..^....F .&9...~.
5E20:  E9 12 00 8B 5E E4 D1 E3  8B 46 E2 26 39 87 9A 01   ....^... .F.&9...
5E30:  7C 03 E9 9E 00 FF 46 DC  8E 06 78 0D 26 A1 E6 00   |.....F. ..x.&...
```

```
5E40:  F7 6E E2 D1 E0 D1 D2 D1  E0 D1 D2 D1 E0 D1 D2 8B   .n...... ........
5E50:  C8 8B 46 E4 8B D9 B1 03  D3 E0 8B F2 99 03 C3 13   ..F..... ........
5E60:  D6 89 46 F2 89 56 F4 C7  46 E8 00 00 E9 03 00 FF   ..F..V.. F.......
5E70:  46 E8 83 7E E8 08 7C 03  E9 58 00 C7 46 E6 00 00   F..~..|. .X..F...
5E80:  E9 03 00 FF 46 E6 83 7E  E6 08 7C 03 E9 2F 00 8B   ....F..~ ..|../..
5E90:  46 F2 8B 56 F4 8E 06 7A  0D 26 03 06 EE 77 83 D2   F..V...z .&...w..
5EA0:  00 B9 0C 00 D3 E2 26 03  16 F0 77 8E C2 8B D8 26   ......&. ..w....&
5EB0:  C6 07 00 83 46 F2 01 83  56 F4 00 E9 C5 FF 8E 06   ....F... V.......
5EC0:  78 0D 26 A1 E6 00 2D 08  00 99 01 46 F2 11 56 F4   x.&...-. ...F..V.
5ED0:  E9 9C FF E9 05 FF E9 EC  FE 8B 46 FE 89 46 FC C7   ........ ..F..F..
5EE0:  46 E4 00 00 E9 03 00 FF  46 E4 8B 46 E4 39 46 DE   F....... F..F.9F.
5EF0:  7F 03 E9 1F 00 8E 06 7E  0D 8B 5E E4 D1 E3 26 8B   .......~ ..^...&.
5F00:  87 9A 00 3B 46 FC 7F 03  E9 03 00 8B 46 FC 89 46   ...;F... ....F..F
5F10:  FC E9 D3 FF 8B 46 FE B9  03 00 99 F7 F9 3B 46 FC   .....F.. .....;F.
5F20:  7E 03 E9 06 00 B8 F9 FF  E9 43 00 8B 46 FE F7 6E   ~....... .C..F..n
5F30:  DE 89 46 EC 8B 46 EC 99  52 50 B8 9C FF F7 6E DC   ..F..F.. RP....n.
5F40:  52 50 9A DA 2F AB 10 05  64 00 83 D2 00 83 FA 00   RP../... d.......
5F50:  7E 03 E9 13 00 7D 03 E9  08 00 3D 1E 00 72 03 E9   ~....}.. ..=..r..
5F60:  06 00 B8 F8 FF E9 06 00  B8 00 00 E9 00 00 5E 5F   ........ ......^_
5F70:  8B E5 5D CB 55 8B EC 81  EC 0C 00 57 56 8E 06 78   ..].U... ...WV..x
5F80:  0D 26 A1 E6 00 99 33 C2  2B C2 B9 03 00 D3 F8 33   .&....3. +......3
5F90:  C2 2B C2 89 46 F4 8E 06  76 0D 26 A1 E8 00 99 33   .+..F... v.&....3
5FA0:  C2 2B C2 B9 03 00 D3 F8  33 C2 2B C2 89 46 FE C7   .+...... 3.+..F..
5FB0:  46 F6 00 00 E9 03 00 FF  46 F6 8B 46 FE 39 46 F6   F....... F..F.9F.
5FC0:  7C 03 E9 82 01 8E 06 7E  0D 8B 5E F6 D1 E3 26 8B   |......~ ..^...&.
5FD0:  87 1A 00 89 46 F8 8B 46  F6 F7 6E F4 03 46 F8 89   ....F..F ..n..F..
5FE0:  46 FA 8E 06 7C 0D 8B 5E  FA 26 8A 87 F5 E9 2A E4   F...|..^ .&....*.
5FF0:  89 46 FC 8B 5E FA 26 8A  87 F2 E9 2A E4 3B 46 FC   .F..^.&. ...*.;F.
6000:  7C 03 E9 03 00 8B 46 FC  8B 5E FA 26 88 87 F2 E9   |.....F. .^.&....
6010:  FF 46 FA 8B 5E FA 26 8A  87 F2 E9 2A E4 3B 46 FC   .F..^.&. ...*.;F.
6020:  7C 03 E9 03 00 8B 46 FC  8B 5E FA 26 88 87 F2 E9   |.....F. .^.&....
6030:  FF 46 FA 8B 5E FA 26 8A  87 F2 E9 2A E4 3B 46 FC   .F..^.&. ...*.;F.
6040:  7C 03 E9 03 00 8B 46 FC  8B 5E FA 26 88 87 F2 E9   |.....F. .^.&....
6050:  83 7E F8 00 7F 03 E9 2A  00 8B 46 F6 F7 6E F4 03   .~.....* ..F..n..
6060:  46 F8 48 89 46 FA 8B 5E  FA 26 8A 87 F2 E9 2A E4   F.H.F..^ .&....*.
6070:  3B 46 FC 7C 03 E9 03 00  8B 46 FC 8B 5E FA 26 88   ;F.|.... .F..^.&.
6080:  87 F2 E9 8E 06 7E 0D 8B  5E F6 D1 E3 26 8B 87 1A   .....~.. ^...&...
6090:  01 89 46 F8 8B 46 F6 F7  6E F4 03 46 F8 89 46 FA   ..F..F.. n..F..F.
60A0:  8E 06 7C 0D 8B 5E FA 26  8A 87 EF E9 2A E4 89 46   ..|..^.& ....*..F
60B0:  FC 8B 5E FA 26 8A 87 F2  E9 2A E4 3B 46 FC 7C 03   ..^.&... .*.;F.|.
60C0:  E9 03 00 8B 46 FC 8B 5E  FA 26 88 87 F2 E9 FF 4E   ....F..^ .&.....N
60D0:  FA 8B 5E FA 26 8A 87 F2  E9 2A E4 3B 46 FC 7C 03   ..^.&... .*.;F.|.
60E0:  E9 03 00 8B 46 FC 8B 5E  FA 26 88 87 F2 E9 FF 4E   ....F..^ .&.....N
60F0:  FA 8B 5E FA 26 8A 87 F2  E9 2A E4 3B 46 FC 7C 03   ..^.&... .*.;F.|.
6100:  E9 03 00 8B 46 FC 8B 5E  FA 26 88 87 F2 E9 8B 46   ....F..^ .&.....F
6110:  F4 48 3B 46 F8 7F 03 E9  2A 00 8B 46 F6 F7 6E F4   .H;F.... *..F..n.
6120:  03 46 F8 40 89 46 FA 8B  5E FA 26 8A 87 F2 E9 2A   .F.@.F.. ^.&....*
6130:  E4 3B 46 FC 7C 03 E9 03  00 8B 46 FC 8B 5E FA 26   .;F.|... ..F..^.&
6140:  88 87 F2 E9 E9 70 FE C7  46 F8 00 00 E9 03 00 FF   .....p.. F.......
6150:  46 F8 8B 46 F4 39 46 F8  7C 03 E9 A2 01 8E 06 7E   F..F.9F. |......~
6160:  0D 8B 5E F8 D1 E3 26 8B  87 9A 00 89 46 F6 8B 46   ..^...&. ....F..F
6170:  F6 F7 6E F4 03 46 F8 89  46 FA 8E 06 7C 0D 8B 5E   ..n..F.. F...|..^
6180:  F4 8B C3 D1 E3 03 D8 03  5E FA 26 8A 87 F2 E9 2A   ........ ^.&....*
6190:  E4 89 46 FC 8B 5E FA 26  8A 87 F2 E9 2A E4 3B 46   ..F..^.& ....*.;F
```

```
61A0:  FC 7C 03 E9 03 00 8B 46  FC 8B 5E FA 26 88 87 F2   .|.....F ..^.&...
61B0:  E9 8B 46 F4 01 46 FA 8B  5E FA 26 8A 87 F2 E9 2A   ..F..F.. ^.&....*
61C0:  E4 3B 46 FC 7C 03 E9 03  00 8B 46 FC 8B 5E FA 26   .;F.|... ..F..^.&
61D0:  88 87 F2 E9 8B 46 F4 01  46 FA 8B 5E FA 26 8A 87   .....F.. F..^.&..
61E0:  F2 E9 2A E4 3B 46 FC 7C  03 E9 03 00 8B 46 FC 8B   ..*.;F.| .....F..
61F0:  5E FA 26 88 87 F2 E9 83  7E F6 00 7F 03 E9 2A 00   ^.&..... ~.....*.
6200:  8B 46 F6 48 F7 6E F4 03  46 F8 89 46 FA 8B 5E FA   .F.H.n.. F..F..^.
6210:  26 8A 87 F2 E9 2A E4 3B  46 FC 7C 03 E9 03 00 8B   &....*.; F.|.....
6220:  46 FC 8B 5E FA 26 88 87  F2 E9 8E 06 7E 0D 8B 5E   F..^.&.. ....~..^
6230:  F8 D1 E3 26 8B 87 9A 01  89 46 F6 8B 46 F6 F7 6E   ...&.... .F..F..n
6240:  F4 03 46 F8 89 46 FA 8E  06 7C 0D 8B 5E FA 8B 46   ..F..F.. .|..^..F
6250:  F4 8B C8 D1 E0 03 C1 2B  D8 26 8A 87 F2 E9 2A E4   .......+ .&....*.
6260:  89 46 FC 8B 5E FA 26 8A  87 F2 E9 2A E4 3B 46 FC   .F..^.&. ...*.;F.
6270:  7C 03 E9 03 00 8B 46 FC  8B 5E FA 26 88 87 F2 E9   |.....F. .^.&....
6280:  8B 46 F4 29 46 FA 8B 5E  FA 26 8A 87 F2 E9 2A E4   .F.)F..^ .&....*.
6290:  3B 46 FC 7C 03 E9 03 00  8B 46 FC 8B 5E FA 26 88   ;F.|.... .F..^.&.
62A0:  87 F2 E9 8B 46 F4 29 46  FA 8B 5E FA 26 8A 87 F2   ....F.)F ..^.&...
62B0:  E9 2A E4 3B 46 FC 7C 03  E9 03 00 8B 46 FC 8B 5E   .*.;F.|. ....F..^
62C0:  FA 26 88 87 F2 E9 8B 46  FE 48 3B 46 F6 7F 03 E9   .&.....F .H;F....
62D0:  2A 00 8B 46 F6 40 F7 6E  F4 03 46 F8 89 46 FA 8B   *..F.@.n ..F..F..
62E0:  5E FA 26 8A 87 F2 E9 2A  E4 3B 46 FC 7C 03 E9 03   ^.&....* .;F.|...
62F0:  00 8B 46 FC 8B 5E FA 26  88 87 F2 E9 E9 50 FE 5E   ..F..^.& .....P.^
6300:  5F 8B E5 5D CB 55 8B EC  81 EC 6E 00 57 56 83 3E   _..].U.. ..n.WV.>
6310:  74 06 00 7C 03 E9 03 00  E9 12 02 2B C0 89 46 FA   t..|.... ...+..F.
6320:  89 46 F8 C7 46 A2 00 00  E9 03 00 FF 46 A2 81 7E   .F..F... ....F..~
6330:  A2 00 01 7C 03 E9 0E 00  8B 5E A2 D1 E3 C7 87 2E   ...|.... .^......
6340:  4A 00 00 E9 E5 FF 8E 06  78 0D 26 A1 E6 00 99 33   J....... x.&....3
6350:  C2 2B C2 B9 03 00 D3 F8  33 C2 2B C2 89 46 96 8E   .+...... 3.+..F..
6360:  06 76 0D 26 A1 E8 00 99  33 C2 2B C2 B9 03 00 D3   .v.&.... 3.+.....
6370:  F8 33 C2 2B C2 89 46 FE  C7 46 98 00 00 E9 03 00   .3.+..F. .F......
6380:  FF 46 98 8B 46 FE 39 46  98 7C 03 E9 3B 01 C7 46   .F..F.9F .|..;..F
6390:  9A 00 00 E9 06 00 FF 46  9A FF 46 A2 8B 46 96 39   .......F ..F..F.9
63A0:  46 9A 7C 03 E9 1F 01 8E  06 7E 0D 8B 5E 98 D1 E3   F.|..... .~..^...
63B0:  8B 46 9A 26 39 87 1A 00  7E 03 E9 36 00 8B 5E 98   .F.&9... ~..6..^.
63C0:  D1 E3 8B 46 9A 26 39 87  1A 01 7D 03 E9 24 00 8B   ...F.&9. ..}..$..
63D0:  5E 9A D1 E3 8B 46 98 26  39 87 9A 00 7E 03 E9 12   ^....F.& 9...~...
63E0:  00 8B 5E 9A D1 E3 8B 46  98 26 39 87 9A 01 7C 03   ..^....F .&9...|.
63F0:  E9 03 00 E9 A0 FF 8E 06  78 0D 26 A1 E6 00 F7 6E   ........ x.&....n
6400:  98 D1 E0 D1 D2 D1 E0 D1  D2 D1 E0 D1 D2 8B C8 8B   ........ ........
6410:  46 9A 8B D9 B1 03 D3 E0  8B F2 99 03 C3 13 D6 89   F....... ........
6420:  46 F4 89 56 F6 8E 06 7C  0D 8B 5E A2 26 8A 87 F2   F..V...| ..^.&...
6430:  E9 2A E4 89 46 FC C7 46  9E 00 00 E9 03 00 FF 46   .*..F..F .......F
6440:  9E 83 7E 9E 08 7C 03 E9  79 00 C7 46 9C 00 00 E9   ..~..|.. y..F....
6450:  03 00 FF 46 9C 83 7E 9C  08 7C 03 E9 50 00 8B 46   ...F..~. .|..P..F
6460:  F4 8B 56 F6 83 46 F4 01  83 56 F6 00 8E 06 7A 0D   ..V..F.. .V....z.
6470:  26 03 06 EE 77 83 D2 00  B9 0C 00 D3 E2 26 03 16   &...w... .....&..
6480:  F0 77 8E C2 8B D8 26 8A  07 2A E4 2B 46 FC 50 9A   .w....&. .*.+F.P.
6490:  04 2F AB 10 83 C4 02 89  46 A0 8B 5E A0 D1 E3 FF   ./...... F..^....
64A0:  87 2E 4A 83 46 F8 01 83  56 FA 00 E9 A4 FF 8E 06   ..J.F... V.......
64B0:  78 0D 26 A1 E6 00 2D 08  00 99 01 46 F4 11 56 F6   x.&...-. ...F..V.
64C0:  E9 7B FF E9 D0 FE E9 B7  FE B8 64 00 BA 00 00 52   .{...... ..d....R
64D0:  50 FF 76 FA FF 76 F8 A1  74 06 99 52 50 9A 74 30   P.v..v.. t..RP.t0
64E0:  AB 10 52 50 9A DA 2F AB  10 89 46 F8 89 56 FA C7   ..RP../. ..F..V..
64F0:  46 A0 FF 00 E9 03 00 FF  4E A0 83 7E FA 00 7D 03   F....... N..~..}.
```

```
6500:  E9 21 00 7E 03 E9 09 00  83 7E F8 00 77 03 E9 13   .!.~.... .~..w...
6510:  00 8B 5E A0 D1 E3 8B 87  2E 4A 99 29 46 F8 19 56   ..^..... .J.)F..V
6520:  FA E9 D3 FF 8A 46 A0 C4  5E 06 26 88 07 5E 5F 8B   .....F.. ^.&..^_.
6530:  E5 5D CB 55 8B EC 81 EC  26 02 57 56 B8 6A 06 1E   .].U.... &.WV.j..
6540:  50 9A 75 14 C9 04 83 C4  04 C7 46 FA 00 00 E9 03   P.u..... ..F.....
6550:  00 FF 46 FA 81 7E FA 00  01 7C 03 E9 1C 00 8B 46   ..F..~.. .|.....F
6560:  FA B1 07 D3 E0 8A 0E 6A  06 2A ED 99 F7 F9 8B 76   .......j .*.....v
6570:  FA D1 E6 89 82 F8 FD E9  D7 FF 8E 06 78 0D 26 A1   ........ ....x.&.
6580:  E6 00 99 33 C2 2B C2 B9  03 00 D3 F8 33 C2 2B C2   ...3.+.. ....3.+.
6590:  89 86 DA FD 8E 06 76 0D  26 A1 E8 00 99 33 C2 2B   ......v. &....3.+
65A0:  C2 B9 03 00 D3 F8 33 C2  2B C2 89 46 FE B8 00 00   ......3. +..F....
65B0:  89 86 DE FD 89 86 EC FD  E9 04 00 FF 86 DE FD 8B   ........ ........
65C0:  46 FE 39 86 DE FD 7C 03  E9 9D 03 C7 86 E2 FD 00   F.9...|. ........
65D0:  00 E9 08 00 FF 86 E2 FD  FF 86 EC FD 8B 86 E2 FD   ........ ........
65E0:  39 86 DA FD 7F 03 E9 7C  03 8E 06 7E 0D 8B 9E DE   9......| ...~....
65F0:  FD D1 E3 8B 86 E2 FD 26  39 87 1A 00 7E 03 E9 3C   .......& 9...~..<
6600:  00 8B 9E DE FD D1 E3 8B  86 E2 FD 26 39 87 1A 01   ........ ...&9...
6610:  7D 03 E9 28 00 8B 9E E2  FD D1 E3 8B 86 DE FD 26   }..(.... .......&
6620:  39 87 9A 00 7E 03 E9 14  00 8B 9E E2 FD D1 E3 8B   9...~... ........
6630:  86 DE FD 26 39 87 9A 01  7C 03 E9 03 00 E9 94 FF   ...&9... |.......
6640:  8E 06 78 0D 26 A1 E6 00  F7 AE DE FD D1 E0 D1 D2   ..x.&... ........
6650:  D1 E0 D1 D2 D1 E0 D1 D2  8B C8 8B 86 E2 FD 8B D9   ........ ........
6660:  B1 03 D3 E0 8B F2 99 03  C3 13 D6 89 86 EE FD 89   ........ ........
6670:  96 F0 FD C7 46 FC 00 00  C7 46 F8 00 00 8B 86 EC   ....F... .F......
6680:  FD 99 F7 BE DA FD 89 96  E0 FD 83 BE E0 FD 00 74   ........ .......t
6690:  03 E9 24 00 8E 06 7C 0D  8B 9E EC FD 26 8A 87 F3   ..$...|. ....&...
66A0:  E9 2A E4 8B 9E EC FD 26  8A 8F F2 E9 2A ED 2B C1   .*.....& ....*.+.
66B0:  D1 E0 89 46 FC E9 51 00  8B 86 DA FD 2B 86 E0 FD   ...F..Q. ....+...
66C0:  48 74 03 E9 24 00 8E 06  7C 0D 8B 9E EC FD 26 8A   Ht..$... |.....&.
66D0:  87 F2 E9 2A E4 8B 9E EC  FD 26 8A 8F F1 E9 2A ED   ...*.... .&....*.
66E0:  2B C1 D1 E0 89 46 FC E9  1F 00 8E 06 7C 0D 8B 9E   +....F.. ....|...
66F0:  EC FD 26 8A 87 F3 E9 2A  E4 8B 9E EC FD 26 8A 8F   ..&....* .....&..
6700:  F1 E9 2A ED 2B C1 89 46  FC 8B 86 EC FD 39 86 DA   ..*.+..F .....9..
6710:  FD 7F 03 E9 28 00 8E 06  7C 0D 8B 9E DA FD 03 9E   ....(... |.......
6720:  EC FD 26 8A 87 F2 E9 2A  E4 8B 9E EC FD 26 8A 8F   ..&....* .....&..
6730:  F2 E9 2A ED 2B C1 D1 E0  89 46 F8 E9 60 00 8B 46   ..*.+... .F..`..F
6740:  FE 48 F7 AE DA FD 3B 86  EC FD 7E 03 E9 28 00 8E   .H....;. ..~..(..
6750:  06 7C 0D 8B 9E EC FD 26  8A 87 F2 E9 2A E4 8B 9E   .|.....& ....*...
6760:  EC FD 2B 9E DA FD 26 8A  8F F2 E9 2A ED 2B C1 D1   ..+...&. ...*.+..
6770:  E0 89 46 F8 E9 27 00 8E  06 7C 0D 8B 9E DA FD 03   ..F..'.. .|......
6780:  9E EC FD 26 8A 87 F2 E9  2A E4 8B 9E EC FD 2B 9E   ...&.... *.....+.
6790:  DA FD 26 8A 8F F2 E9 2A  ED 2B C1 89 46 F8 8E 06   ..&....* .+..F...
67A0:  7C 0D 8B 9E EC FD 26 8A  87 F2 E9 2A E4 8A 0E 6A   |.....&. ...*...j
67B0:  06 2A ED 2B C1 89 86 F2  FD 8B 46 FC D1 E0 89 86   .*.+.... ..F.....
67C0:  F6 FD 8B 46 F8 D1 E0 89  86 F4 FD 8B 46 F8 03 46   ...F.... ....F..F
67D0:  FC 8B C8 D1 E0 03 C1 D1  E0 03 C1 F7 D8 89 86 E8   ........ ........
67E0:  FD C7 86 EA FD 00 00 E9  0C 00 FF 86 EA FD 8B 86   ........ ........
67F0:  F4 FD 01 86 E8 FD 83 BE  EA FD 08 7C 03 E9 62 01   ........ ...|..b.
6800:  8B 86 E8 FD 89 86 E6 FD  C7 86 E4 FD 00 00 E9 0C   ........ ........
6810:  00 FF 86 E4 FD 8B 86 F6  FD 01 86 E6 FD 83 BE E4   ........ ........
6820:  FD 08 7C 03 E9 24 01 8B  86 EE FD 8B 96 F0 FD 8E   ..|..$.. ........
6830:  06 7A 0D 26 03 06 EE 77  83 D2 00 B9 0C 00 D3 E2   .z.&...w ........
6840:  26 03 16 F0 77 8E C2 8B  D8 26 8A 07 2A E4 89 46   &...w... .&..*..F
6850:  FA 83 7E FA 00 7F 03 E9  E4 00 8B 86 E6 FD 99 33   ..~..... .......3
```

EXTRACT.DMP Thursday, January 6, 1994 12:02pm Page 32

```
6860:  C2 2B C2 B9 05 00 D3 F8  33 C2 2B C2 03 86 F2 FD   .+...... 3.+.....
6870:  29 46 FA 83 7E FA 00 7E  03 E9 29 00 8B 86 EE FD   )F..~..~ ..).....
6880:  8B 96 F0 FD 8E 06 7A 0D  26 03 06 EE 77 83 D2 00   ......z. &...w...
6890:  B9 0C 00 D3 E2 26 03 16  F0 77 8E C2 8B D8 26 C6   .....&.. .w....&.
68A0:  07 01 E9 99 00 8B 76 FA  D1 E6 8B 82 F8 FD 89 46   ......v. .......F
68B0:  FA 81 7E FA FF 00 7D 03  E9 29 00 8B 86 EE FD 8B   ..~...}. .)......
68C0:  96 F0 FD 8E 06 7A 0D 26  03 06 EE 77 83 D2 00 B9   .....z.& ...w....
68D0:  0C 00 D3 E2 26 03 16 F0  77 8E C2 8B D8 26 C6 07   ....&... w....&..
68E0:  FE E9 5A 00 83 7E FA 7F  74 03 E9 29 00 8B 86 EE   ..Z..~.. t..)....
68F0:  FD 8B 96 F0 FD 8E 06 7A  0D 26 03 06 EE 77 83 D2   .......z .&...w..
6900:  00 B9 0C 00 D3 E2 26 03  16 F0 77 8E C2 8B D8 26   ......&. ..w....&
6910:  C6 07 80 E9 28 00 8B 86  EE FD 8B 96 F0 FD 8E 06   ....(... ........
6920:  7A 0D 26 03 06 EE 77 83  D2 00 B9 0C 00 D3 E2 26   z.&...w. .......&
6930:  03 16 F0 77 8E C2 8B D8  8A 46 FA 26 88 07 83 86   ...w.... .F.&....
6940:  EE FD 01 83 96 F0 FD 00  E9 C6 FE 8E 06 78 0D 26   ........ .....x.&
6950:  A1 E6 00 2D 08 00 99 01  86 EE FD 11 96 F0 FD E9   ...-.... ........
6960:  88 FE E9 6F FC E9 53 FC  5E 5F 8B E5 5D CB 55 8B   ...o..S. ^_..].U.
6970:  EC 81 EC 0A 00 57 56 8B  46 06 99 33 C2 2B C2 B9   .....WV. F..3.+..
6980:  03 00 D3 F8 33 C2 2B C2  89 46 FC 8B 46 08 99 33   ....3.+. .F..F..3
6990:  C2 2B C2 B9 03 00 D3 F8  33 C2 2B C2 89 46 FA 8E   .+...... 3.+..F..
69A0:  06 78 0D 26 A1 E6 00 99  33 C2 2B C2 B9 03 00 D3   .x.&.... 3.+.....
69B0:  F8 33 C2 2B C2 89 46 F6  8B 46 F6 F7 6E FA 8B D8   .3.+..F. .F..n...
69C0:  03 5E FC D1 E3 8B 87 E2  22 99 33 C2 2B C2 B9 03   .^...... ".3.+...
69D0:  00 D3 F8 33 C2 2B C2 89  46 FE 8B 46 FE B1 07 D3   ...3.+.. F..F....
69E0:  E0 8A 0E 6A 06 2A ED 99  F7 F9 89 46 F8 8A 46 F8   ...j.*.. ...F..F.
69F0:  04 7F C4 5E 0E 26 88 07  B0 7F 2A 46 F8 C4 5E 0A   ...^.&.. ..*F..^.
6A00:  26 88 07 8B 46 F8 99 33  C2 2B C2 B9 03 00 D3 F8   &...F..3 .+......
6A10:  33 C2 2B C2 C4 5E 12 26  89 07 5E 5F 8B E5 5D CB   3.+..^.& ..^_..].
6A20:  55 8B EC 81 EC 0A 00 57  56 C7 46 F6 00 00 2B C0   U......W V.F...+.
6A30:  89 46 FC 89 46 FA E9 14  00 8E 06 78 0D 26 A1 E6   .F..F... ...x.&..
6A40:  00 FF 46 F6 F7 6E F6 89  46 FA 89 56 FC 8E 06 76   ..F..n.. F..V...v
6A50:  0D 8B 46 F6 26 39 06 E8  00 7F 03 E9 E6 00 C7 46   ..F.&9.. .......F
6A60:  F8 00 00 E9 0B 00 FF 46  F8 83 46 FA 01 83 56 FC   .......F ..F...V.
6A70:  00 8E 06 78 0D 8B 46 F8  26 39 06 E6 00 7F 03 E9   ...x..F. &9......
6A80:  BF 00 8B 46 FA 8B 56 FC  8E 06 7A 0D 26 03 06 EE   ...F..V. ..z.&...
6A90:  77 83 D2 00 B9 0C 00 D3  E2 26 03 16 F0 77 8E C2   w....... .&...w..
6AA0:  8B D8 26 8A 07 88 46 FE  80 7E FE 7F 74 03 E9 27   ..&...F. .~..t..'
6AB0:  00 8B 46 FA 8B 56 FC 8E  06 7A 0D 26 03 06 EE 77   ..F..V.. .z.&...w
6AC0:  83 D2 00 B9 0C 00 D3 E2  26 03 16 F0 77 8E C2 8B   ........ &...w...
6AD0:  D8 26 C6 07 FF E9 66 00  80 7E FE FF 75 03 E9 5D   .&....f. .~..u..]
6AE0:  00 80 7E FE 00 75 03 E9  54 00 80 7E FE 7F 77 03   ..~..u.. T..~..w.
6AF0:  E9 27 00 8B 46 FA 8B 56  FC 8E 06 7A 0D 26 03 06   .'..F..V ...z.&..
6B00:  EE 77 83 D2 00 B9 0C 00  D3 E2 26 03 16 F0 77 8E   .w...... ..&...w.
6B10:  C2 8B D8 26 C6 07 FF E9  24 00 8B 46 FA 8B 56 FC   ...&.... $..F..V.
6B20:  8E 06 7A 0D 26 03 06 EE  77 83 D2 00 B9 0C 00 D3   ..z.&... w.......
6B30:  E2 26 03 16 F0 77 8E C2  8B D8 26 C6 07 00 E9 25   .&...w.. ..&....%
6B40:  FF E9 F5 FE 5E 5F 8B E5  5D CB 55 8B EC 81 EC 10   ....^_.. ].U.....
6B50:  06 57 56 8D 86 E4 FD 89  46 EA 8C 56 EC 8D 86 EC   .WV..... F..V....
6B60:  FB 89 46 E2 8C 56 E4 8D  86 F6 F9 89 46 DC 8C 56   ..F..V.. ....F..V
6B70:  DE C7 86 E2 FD 79 06 C7  86 F4 F9 7E 02 8E 06 78   .....y.. ...~...x
6B80:  0D 26 A1 E6 00 99 33 C2  2B C2 B9 03 00 D3 F8 33   .&....3. +......3
6B90:  C2 2B C2 89 86 EA FB 8E  06 76 0D 26 A1 E8 00 99   .+...... .v.&....
6BA0:  33 C2 2B C2 B9 03 00 D3  F8 33 C2 2B C2 89 46 FE   3.+..... .3.+..F.
6BB0:  2B C0 89 86 F2 F9 89 86  F0 F9 8E 06 78 0D 26 FF   +....... ....x.&.
```

```
6BC0:  36 E6 00 8B 86 F0 F9 8B  96 F2 F9 8E 06 7A 0D 26   6....... .....z.&
6BD0:  03 06 EE 77 83 D2 00 B9  0C 00 D3 E2 26 03 16 F0   ...w.... ....&...
6BE0:  77 52 50 FF 76 E4 FF 76  E2 9A FA 2D AB 10 83 C4   wRP.v..v ...-....
6BF0:  0A 8E 06 78 0D 26 A1 E6  00 99 01 86 F0 F9 11 96   ...x.&.. ........
6C00:  F2 F9 26 FF 36 E6 00 8B  86 F0 F9 8B 96 F2 F9 8E   ..&.6... ........
6C10:  06 7A 0D 26 03 06 EE 77  83 D2 00 B9 0C 00 D3 E2   .z.&...w ........
6C20:  26 03 16 F0 77 52 50 FF  76 DE FF 76 DC 9A FA 2D   &...wRP. v..v...-
6C30:  AB 10 83 C4 0A C7 46 DA  01 00 E9 03 00 FF 46 DA   ......F. ......F.
6C40:  8E 06 76 0D 26 A1 E8 00  48 3B 46 DA 7F 03 E9 7E   ..v.&... H;F....~
6C50:  02 8B 46 DA 99 33 C2 2B  C2 B9 03 00 D3 F8 33 C2   ..F..3.+ ......3.
6C60:  2B C2 8B D8 D1 E3 8E 06  7E 0D 26 8B 87 1A 00 B1   +....... ~.&.....
6C70:  03 D3 E0 89 46 D8 8B 46  DA 99 33 C2 2B C2 B9 03   ....F..F ..3.+...
6C80:  00 D3 F8 33 C2 2B C2 8B  D8 D1 E3 26 8B 87 1A 01   ...3.+.. ...&....
6C90:  40 B1 03 D3 E0 89 86 E0  FD 8B 46 EA 8B 56 EC 89   @....... ..F..V..
6CA0:  46 E6 89 56 E8 8B 46 E2  8B 56 E4 89 46 EA 89 56   F..V..F. .V..F..V
6CB0:  EC 8B 46 DC 8B 56 DE 89  46 E2 89 56 E4 8B 46 E6   ..F..V.. F..V..F.
6CC0:  8B 56 E8 89 46 DC 89 56  DE 8E 06 78 0D 26 A1 E6   .V..F..V ...x.&..
6CD0:  00 99 01 86 F0 F9 11 96  F2 F9 26 FF 36 E6 00 8B   ........ ..&.6...
6CE0:  86 F0 F9 8B 96 F2 F9 8E  06 7A 0D 26 03 06 EE 77   ........ .z.&...w
6CF0:  83 D2 00 B9 0C 00 D3 E2  26 03 16 F0 77 52 50 FF   ........ &...wRP.
6D00:  76 DE FF 76 DC 9A FA 2D  AB 10 83 C4 0A 8B 46 DC   v..v...- ......F.
6D10:  8B 56 DE 03 46 D8 89 46  F4 89 56 F6 E9 03 00 FF   .V..F..F ..V.....
6D20:  46 F4 8B 46 DC 03 86 E0  FD 3B 46 F4 77 03 E9 19   F..F.... .;F.w...
6D30:  00 C4 5E F4 26 80 3F 7F  74 03 E9 0A 00 C4 5E F4   ..^.&.?. t.....^.
6D40:  26 C6 07 FF E9 00 00 E9  D5 FF C4 5E DC 8B 76 D8   &....... ...^..v.
6D50:  26 8A 00 2A E4 C4 5E E2  8B 76 D8 26 8A 08 2A ED   &..*..^. .v.&..*.
6D60:  03 C1 C4 5E EA 8B 76 D8  26 8A 08 2A ED 03 C1 89   ...^..v. &..*....
6D70:  46 FC 8B 46 FC 89 46 F2  8B 46 FC 89 46 F0 8B 46   F..F..F. .F..F..F
6D80:  F2 03 46 F0 03 46 FC 89  46 EE 8B 46 D8 40 89 46   ..F..F.. F..F.@.F
6D90:  E0 8B 46 D8 99 8E 06 78  0D 8B C8 26 A1 E6 00 8B   ..F....x ...&....
6DA0:  DA F7 6E DA 03 C8 13 DA  89 4E F8 89 5E FA E9 0B   ..n..... .N..^...
6DB0:  00 FF 46 E0 83 46 F8 01  83 56 FA 00 8B 86 E0 FD   ..F..F.. .V......
6DC0:  39 46 E0 7C 03 E9 04 01  8B 46 FC 29 46 EE 8B 46   9F.|.... .F.)F..F
6DD0:  F2 89 46 FC 8B 46 F0 89  46 F2 C4 5E DC 8B 76 E0   ..F..F.. F..^..v.
6DE0:  26 8A 00 2A E4 C4 5E E2  8B 76 E0 26 8A 08 2A ED   &..*..^. .v.&..*.
6DF0:  03 C1 C4 5E EA 8B 76 E0  26 8A 08 2A ED 03 C1 89   ...^..v. &..*....
6E00:  46 F0 8B 46 F0 01 46 EE  8B 86 E2 FD 39 46 EE 7F   F..F..F. ....9F..
6E10:  03 E9 27 00 8B 46 F8 8B  56 FA 8E 06 7A 0D 26 03   ..'..F.. V...z.&.
6E20:  06 EE 77 83 D2 00 B9 0C  00 D3 E2 26 03 16 F0 77   ..w..... ...&...w
6E30:  8E C2 8B D8 26 C6 07 FF  E9 8E 00 8B 86 F4 F9 39   ....&... .......9
6E40:  46 EE 7C 03 E9 27 00 8B  46 F8 8B 56 FA 8E 06 7A   F.|..'.. F..V...z
6E50:  0D 26 03 06 EE 77 83 D2  00 B9 0C 00 D3 E2 26 03   .&...w.. ......&.
6E60:  16 F0 77 8E C2 8B D8 26  C6 07 00 E9 5B 00 8B 5E   ..w....& ....[..^
6E70:  E0 C4 76 E2 26 80 78 FF  7F 73 03 E9 27 00 8B 46   ..v.&.x. .s..'..F
6E80:  F8 8B 56 FA 8E 06 7A 0D  26 03 06 EE 77 83 D2 00   ..V...z. &...w...
6E90:  B9 0C 00 D3 E2 26 03 16  F0 77 8E C2 8B D8 26 C6   .....&.. .w....&.
6EA0:  07 FF E9 24 00 8B 46 F8  8B 56 FA 8E 06 7A 0D 26   ...$..F. .V...z.&
6EB0:  03 06 EE 77 83 D2 00 B9  0C 00 D3 E2 26 03 16 F0   ...w.... ....&...
6EC0:  77 8E C2 8B D8 26 C6 07  00 E9 E5 FE E9 6E FD 5E   w....&.. .....n.^
6ED0:  5F 8B E5 5D CB 55 8B EC  81 EC 00 00 57 56 83 3E   _..].U.. ....WV.>
6EE0:  76 06 00 75 03 E9 08 00  9A BA 1C C9 04 E9 05 00   v..u.... ........
6EF0:  9A 90 1B C9 04 5E 5F 8B  E5 5D CB 55 8B EC 81 EC   .....^_. .].U....
6F00:  00 00 57 56 B8 FF FF 8E  06 78 0D 26 2B 06 E6 00   ..WV.... .x.&+...
6F10:  99 A3 2E 4C 89 16 30 4C  26 A1 E6 00 F7 D8 99 A3   ...L..0L &.......
```

```
6F20:  32 4C 89 16 34 4C B8 01  00 26 2B 06 E6 00 99 A3   2L..4L.. .&+.....
6F30:  36 4C 89 16 38 4C C7 06  3A 4C FF FF C7 06 3C 4C   6L..8L.. :L....<L
6F40:  FF FF 2B C0 A3 40 4C A3  3E 4C C7 06 42 4C 01 00   ..+..@L. >L..BL..
6F50:  C7 06 44 4C 00 00 26 A1  E6 00 48 99 A3 46 4C 89   ..DL..&. ..H..FL.
6F60:  16 48 4C 26 A1 E6 00 99  A3 4A 4C 89 16 4C 4C 26   .HL&.... .JL..LL&
6F70:  A1 E6 00 40 99 A3 4E 4C  89 16 50 4C 5E 5F 8B E5   ...@..NL ..PL^_..
6F80:  5D CB 55 8B EC 81 EC 12  00 57 56 8E 06 76 0D 26   ].U..... .WV..v.&
6F90:  A1 E8 00 8E 06 78 0D 26  F7 2E E6 00 89 46 EE 89   .....x.& .....F..
6FA0:  56 F0 2B C0 89 46 F4 89  46 F2 E9 08 00 83 46 F2   V.+..F.. F.....F.
6FB0:  01 83 56 F4 00 8B 46 EE  8B 56 F0 39 56 F4 7E 03   ..V...F. .V.9V.~.
6FC0:  E9 F7 00 7D 03 E9 08 00  39 46 F2 72 03 E9 EA 00   ...}.... 9F.r....
6FD0:  B8 00 00 89 46 FE 89 46  F8 C7 46 F6 00 00 E9 03   ....F..F ..F.....
6FE0:  00 FF 46 F6 83 7E F6 09  7C 03 E9 CA 00 8B 5E F6   ..F..~.. |.....^.
6FF0:  D1 E3 D1 E3 8B 87 2E 4C  8B 97 30 4C 03 46 F2 13   .......L ..0L.F..
7000:  56 F4 89 46 FA 89 56 FC  83 7E FC 00 7D 03 E9 4D   V..F..V. .~..}..M
7010:  00 8B 46 FA 8B 56 FC 39  56 F0 7D 03 E9 3F 00 7E   ..F..V.9 V.}..?.~
7020:  03 E9 08 00 39 46 EE 77  03 E9 32 00 8B 46 FA 8B   ....9F.w ..2..F..
7030:  56 FC 8E 06 80 0D 26 03  06 1E 78 83 D2 00 B9 0C   V.....&. ..x.....
7040:  00 D3 E2 26 03 16 20 78  8E C2 8B D8 26 80 3F 7F   ...&.. x ....&.?.
7050:  73 03 E9 06 00 FF 46 F8  E9 03 00 FF 46 FE 8B 46   s.....F. ....F..F
7060:  F8 39 46 FE 7E 03 E9 27  00 8B 46 F2 8B 56 F4 8E   .9F.~..' ..F..V..
7070:  06 7A 0D 26 03 06 EE 77  83 D2 00 B9 0C 00 D3 E2   .z.&...w ........
7080:  26 03 16 F0 77 8E C2 8B  D8 26 C6 07 FF E9 24 00   &...w... .&....$.
7090:  8B 46 F2 8B 56 F4 8E 06  7A 0D 26 03 06 EE 77 83   .F..V... z.&...w.
70A0:  D2 00 B9 0C 00 D3 E2 26  03 16 F0 77 8E C2 8B D8   .......& ...w....
70B0:  26 C6 07 00 E9 2A FF E9  F3 FE 5E 5F 8B E5 5D CB   &....*.. ..^_..].
70C0:  55 8B EC 81 EC 04 00 57  56 2B C0 89 46 FE 89 46   U......W V+..F..F
70D0:  FC E9 08 00 83 46 FC 01  83 56 FE 00 8E 06 76 0D   .....F.. .V....v.
70E0:  26 A1 E8 00 8E 06 78 0D  26 F7 2E E6 00 3B 56 FE   &.....x. &....;V.
70F0:  7D 03 E9 5A 00 7E 03 E9  08 00 3B 46 FC 77 03 E9   }..Z.~.. ..;F.w..
7100:  4D 00 8B 46 FC 8B 56 FE  8E 06 7A 0D 26 03 06 EE   M..F..V. ..z.&...
7110:  77 83 D2 00 B9 0C 00 D3  E2 26 03 16 F0 77 8E C2   w....... .&...w..
7120:  8B D8 26 8A 07 8B C8 8B  46 FC 8B 56 FE 8E 06 80   ..&..... F..V....
7130:  0D 8B D9 26 03 06 1E 78  83 D2 00 B9 0C 00 D3 E2   ...&...x ........
7140:  26 03 16 20 78 8E C2 8B  F0 26 88 1C E9 85 FF 5E   &.. x... .&.....^
7150:  5F 8B E5 5D CB 55 8B EC  81 EC 00 00 57 56 8E 06   _..].U.. ....WV..
7160:  80 0D 26 A1 20 78 26 0B  06 1E 78 75 03 E9 12 00   ..&. x&. ..xu....
7170:  26 FF 36 20 78 26 FF 36  1E 78 9A 52 29 AB 10 83   &.6 x&.6 .x.R)...
7180:  C4 04 8E 06 80 0D 2B C0  26 A3 20 78 26 A3 1E 78   ......+. &. x&..x
7190:  5E 5F 8B E5 5D CB 55 8B  EC 81 EC 0A 00 57 56 B8   ^_..].U. .....WV.
71A0:  FF FF 89 46 F8 89 46 FC  C7 46 FA 00 00 C7 46 FE   ...F..F. .F....F.
71B0:  01 00 E9 03 00 FF 46 FE  8B 46 0A 48 3B 46 FE 7F   ......F. .F.H;F..
71C0:  03 E9 CC 00 C4 5E 06 8B  76 FE 8A 46 0C 26 38 00   .....^.. v..F.&8.
71D0:  75 03 E9 24 00 8B 5E FE  C4 76 06 8A 46 0C 26 38   u..$..^. .v..F.&8
71E0:  40 FF 74 03 E9 1A 00 8B  5E FE C4 76 06 8A 46 0C   @.t..... ^..v..F.
71F0:  26 38 40 01 74 03 E9 08  00 C7 46 F6 01 00 E9 05   &8@.t... ..F.....
7200:  00 C7 46 F6 00 00 83 7E  F6 00 75 03 E9 47 00 83   ..F....~ ..u..G..
7210:  7E FA 00 74 03 E9 3E 00  C7 46 FA 01 00 83 7E FC   ~..t..>. .F....~.
7220:  FF 75 03 E9 27 00 8B 46  F8 2B 46 0E 50 9A 04 2F   .u..'..F .+F.P../
7230:  AB 10 83 C4 02 8B 4E FE  2B 4E 0E 51 8B F0 9A 04   ......N. +N.Q....
7240:  2F AB 10 83 C4 02 3B C6  7C 03 E9 06 00 8B 46 FE   /.....;. |.....F.
7250:  89 46 FC E9 37 00 83 7E  F6 00 74 03 E9 09 00 83   .F..7..~ ..t.....
7260:  7E FA 00 74 03 E9 0E 00  8B 46 0A 2B 46 FE 3D 02   ~..t.... .F.+F.=.
7270:  00 74 03 E9 17 00 C7 46  FA 00 00 8B 46 FC 39 46   .t.....F ....F.9F
```

```
7280:  F8 7C 03 E9 07 00 8B 46  FE 48 89 46 F8 E9 25 FF   .|.....F .H.F..%.
7290:  83 7E FC 00 7C 03 E9 06  00 B8 00 00 E9 1C 00 8B   .~..|... ........
72A0:  46 FC C4 5E 10 26 89 07  8B 46 F8 C4 5E 14 26 89   F..^.&.. .F..^.&.
72B0:  07 8B 46 F8 2B 46 FC 40  E9 00 00 5E 5F 8B E5 5D   ..F.+F.@ ...^_..]
72C0:  CB 55 8B EC 81 EC 32 20  57 56 C7 86 D8 DF 0E 00   .U....2  WV......
72D0:  C7 86 F2 DF 00 00 8E 06  82 0D 26 A1 22 02 F7 D8   ........ ..&."...
72E0:  89 86 D2 DF C7 86 EE DF  00 00 E9 04 00 FF 86 EE   ........ ........
72F0:  DF 8E 06 84 0D 8B 86 EE  DF 26 39 06 36 02 7F 03   ........ .&9.6...
7300:  E9 80 00 8E 06 82 0D 26  A1 22 02 01 86 D2 DF 8B   .......& ."......
7310:  86 D2 DF 89 86 F2 DF C7  86 D0 DF 00 00 E9 08 00   ........ ........
7320:  FF 86 D0 DF FF 86 F2 DF  8E 06 82 0D 8B 86 D0 DF   ........ ........
7330:  26 39 06 22 02 7F 03 E9  46 00 8B 86 EE DF 39 06   &9."....  F.....9.
7340:  E0 22 7F 03 E9 0C 00 8B  B6 F2 DF C6 82 FE EF 00   ."...... ........
7350:  E9 2A 00 8E 06 86 0D 8B  9E F2 DF A0 7A 06 26 84   .*...... ....z.&.
7360:  87 EE 67 75 03 E9 0C 00  8B B6 F2 DF C6 82 FE EF   ..gu.... ........
7370:  0A E9 09 00 8B B6 F2 DF  C6 82 FE EF 00 E9 A0 FF   ........ ........
7380:  E9 6A FF C7 86 F2 DF 00  00 C7 86 D2 DF 00 00 C7   .j...... ........
7390:  86 EE DF 01 00 E9 04 00  FF 86 EE DF 8E 06 84 0D   ........ ........
73A0:  26 A1 36 02 48 3B 86 EE  DF 7F 03 E9 07 01 8E 06   &.6.H;.. ........
73B0:  82 0D 26 A1 22 02 01 86  D2 DF 8B 86 EE DF 39 06   ..&."... ......9.
73C0:  E0 22 7F 03 E9 03 00 E9  CE FF 8B 86 D2 DF 40 89   ."...... ......@.
73D0:  86 F2 DF C7 86 D0 DF 01  00 E9 04 00 FF 86 D0 DF   ........ ........
73E0:  8E 06 82 0D 26 A1 22 02  48 3B 86 D0 DF 7F 03 E9   ....&.". H;......
73F0:  C0 00 26 8B 36 22 02 03  B6 F2 DF 8A 82 FD EF 2A   ..&.6".. .......*
7400:  E4 26 8B 36 22 02 03 B6  F2 DF 8A 8A FF EF 2A ED   .&.6"... ......*.
7410:  03 C1 26 8B 36 22 02 03  B6 F2 DF 8A 8A FE EF 2A   ..&.6".. .......*
7420:  ED 03 C1 8B B6 F2 DF 26  2B 36 22 02 8A 8A FD EF   .......& +6".....
7430:  2A ED 03 C1 8B B6 F2 DF  26 2B 36 22 02 8A 8A FF   *....... &+6"....
7440:  EF 2A ED 03 C1 8B B6 F2  DF 26 2B 36 22 02 8A 8A   .*...... .&+6"...
7450:  FE EF 2A ED 03 C1 8B B6  F2 DF 8A 8A FD EF 2A ED   ..*..... ......*.
7460:  03 C1 8B B6 F2 DF 8A 8A  FF EF 2A ED 03 C1 8B B6   ........ ..*.....
7470:  F2 DF 8A 8A FE EF 2A ED  03 C1 B9 09 00 99 F7 F9   ......*. ........
7480:  8B B6 F2 DF 88 82 F8 DF  8B B6 F2 DF 80 BA F8 DF   ........ ........
7490:  05 73 03 E9 0C 00 8B B6  F2 DF C6 82 F8 DF 0A E9   .s...... ........
74A0:  09 00 8B B6 F2 DF C6 82  F8 DF 00 FF 86 F2 DF E9   ........ ........
74B0:  2A FF E9 E3 FE C7 86 D6  DF 00 00 C7 86 F4 DF 0F   *....... ........
74C0:  27 C7 86 EA DF 00 00 C7  46 FE 00 00 C7 86 EE DF   '....... F.......
74D0:  01 00 E9 04 00 FF 86 EE  DF 8E 06 84 0D 26 A1 36   ........ .....&.6
74E0:  02 48 3B 86 EE DF 7F 03  E9 BF 01 8B 86 EE DF 39   .H;..... .......9
74F0:  06 E0 22 7F 03 E9 03 00  E9 DA FF 8B 86 EE DF B1   .."..... ........
7500:  04 D3 E0 99 33 C2 2B C2  B9 03 00 D3 F8 33 C2 2B   ....3.+. .....3.+
7510:  C2 89 86 DE DF 8E 06 7E  0D 8B 9E DE DF D1 E3 26   .......~ .......&
7520:  8B 87 1A 01 8B 9E DE DF  D1 E3 26 03 87 1A 00 B1   ........ ..&.....
7530:  03 D3 E0 99 33 C2 2B C2  B9 05 00 D3 F8 33 C2 2B   ....3.+. .....3.+
7540:  C2 89 86 E2 DF 8D 86 FC  EF 16 50 8D 8E DC DF 16   ........ ..P.....
7550:  51 FF B6 E2 DF B2 0A 52  8E 06 82 0D 26 FF 36 22   Q......R ....&.6"
7560:  02 26 A1 22 02 F7 AE EE  DF 8B F0 8D 82 F8 DF 16   .&.".... ........
7570:  50 9A 06 23 C9 04 83 C4  12 89 86 E6 DF 83 BE EA   P..#.... ........
7580:  DF 00 74 03 E9 3E 00 8E  06 82 0D 26 A1 22 02 B9   ..t..>.. ...&."..
7590:  05 00 99 F7 F9 3B 46 FE  7C 03 E9 28 00 8B 46 FE   .....;F. |..(..F.
75A0:  39 86 E6 DF 7C 03 E9 1C  00 C7 86 EA DF 01 00 8B   9...|... ........
75B0:  86 FC EF 03 86 DC DF 40  B1 04 D3 E0 99 2B C2 D1   .......@ .....+..
75C0:  F8 89 86 DA DF 8B 86 E6  DF 89 46 FE 83 BE EA DF   ........ ..F.....
75D0:  00 74 03 E9 03 00 E9 FC  FE 83 7E FE 00 7F 03 E9   .t...... ..~.....
```

```
75E0:  16 00 8B 86 FC EF 03 86  DC DF 40 B1 04 D3 E0 99   ........ ..@.....
75F0:  2B C2 D1 F8 89 86 F8 EF  8B 86 DA DF 2B 86 F8 EF   +....... ....+...
7600:  50 9A 04 2F AB 10 83 C4  02 8E 06 82 0D 8B C8 26   P../.... .......&
7610:  A1 22 02 8B D1 B1 04 D3  E0 8B CA 8B D9 99 33 C2   .".....  ......3.
7620:  2B C2 B9 02 00 D3 F8 33  C2 2B C2 3B C3 7F 03 E9   +......3 .+.;....
7630:  2E 00 8B 86 F8 EF 89 86  DA DF 8B 86 F4 DF 39 46   ........ ......9F
7640:  FE 7C 03 E9 17 00 8B 46  FE 89 86 F4 DF 8B 86 EE   .|.....F ........
7650:  DF 89 86 D6 DF 8B 86 DA  DF 89 86 CE DF E9 26 00   ........ ......&.
7660:  8B 86 F4 DF 40 3B 46 FE  7D 03 E9 16 00 C7 86 F4   ....@;F. }.......
7670:  DF 00 00 8B 86 EE DF 89  86 D6 DF 8B 86 DA DF 89   ........ ........
7680:  86 CE DF E9 24 00 83 7E  FE 00 74 03 E9 03 00 E9   ....$..~ ..t.....
7690:  18 00 8B 86 F4 DF 8B C8  D1 E0 03 C1 3B 46 FE 7C   ........ ....;F.|
76A0:  03 E9 03 00 E9 03 00 E9  2B FE C7 86 E8 DF 00 00   ........ +.......
76B0:  C7 86 FA EF 0F 27 C7 86  EA DF 00 00 8E 06 84 0D   .....'.. ........
76C0:  26 A1 36 02 2D 02 00 89  86 EE DF E9 04 00 FF 8E   &.6.-... ........
76D0:  EE DF 8B 86 EE DF 39 86  D6 DF 7E 03 E9 FE 00 8B   ......9. ..~.....
76E0:  86 EE DF B1 04 D3 E0 99  33 C2 2B C2 B9 03 00 D3   ........ 3.+.....
76F0:  F8 33 C2 2B C2 89 86 DE  DF 8E 06 7E 0D 8B 9E DE   .3.+.... ...~....
7700:  DF D1 E3 26 8B 87 1A 01  8B 9E DE DF D1 E3 26 03   ...&.... ......&.
7710:  87 1A 00 B1 03 D3 E0 99  33 C2 2B C2 B9 05 00 D3   ........ 3.+.....
7720:  F8 33 C2 2B C2 89 86 E2  DF 8D 86 FC EF 16 50 8D   .3.+.... ......P.
7730:  8E DC DF 16 51 FF B6 E2  DF B2 0A 52 8E 06 82 0D   ....Q... ...R....
7740:  26 FF 36 22 02 26 A1 22  02 F7 AE EE DF 8B F0 8D   &.6".&." ........
7750:  82 F8 DF 16 50 9A 06 23  C9 04 83 C4 12 89 46 FE   ....P..# ......F.
7760:  83 7E FE 00 7F 03 E9 16  00 8B 86 FC EF 03 86 DC   .~...... ........
7770:  DF 40 B1 04 D3 E0 99 2B  C2 D1 F8 89 86 DA DF 83   .@.....+ ........
7780:  BE EA DF 00 74 03 E9 24  00 8E 06 82 0D 26 A1 22   ....t..$ .....&."
7790:  02 99 33 C2 2B C2 B9 02  00 D3 F8 33 C2 2B C2 3B   ..3.+... ...3.+.;
77A0:  46 FE 7C 03 E9 06 00 C7  86 EA DF 01 00 83 BE EA   F.|..... ........
77B0:  DF 00 75 03 E9 23 00 8B  86 FA EF 39 46 FE 7C 03   ..u..#.. ...9F.|.
77C0:  E9 17 00 8B 46 FE 89 86  FA EF 8B 86 EE DF 89 86   ....F... ........
77D0:  E8 DF 8B 86 DA DF 89 86  D4 DF E9 F1 FE 83 BE F4   ........ ........
77E0:  DF 00 7F 03 E9 30 00 C7  86 F6 DF 01 00 8B 86 D4   .....0.. ........
77F0:  DF 03 86 CE DF 99 2B C2  D1 F8 89 86 E4 DF 8B 86   ......+. ........
7800:  E8 DF 03 86 D6 DF 40 B1  04 D3 E0 99 2B C2 D1 F8   ......@. ....+...
7810:  89 86 E0 DF E9 A5 00 8B  86 D6 DF 39 86 E8 DF 7D   ........ ...9...}
7820:  03 E9 7B 00 8E 06 84 0D  26 A1 36 02 B9 03 00 99   ..{..... &.6.....
7830:  F7 F9 8B 8E E8 DF 2B 8E  D6 DF 3B C1 7F 03 E9 5E   ......+. ..;....^
7840:  00 8B 86 CE DF 2B 86 D4  DF 50 9A 04 2F AB 10 83   .....+.. .P../...
7850:  C4 02 8E 06 82 0D 8B C8  26 A1 22 02 8B D1 B1 04   ........ &.".....
7860:  D3 E0 BB 06 00 8B F2 99  F7 FB 3B C6 7F 03 E9 2E   ........ ..;.....
7870:  00 C7 86 F6 DF 02 00 8B  86 D4 DF 03 86 CE DF 99   ........ ........
7880:  2B C2 D1 F8 89 86 E4 DF  8B 86 E8 DF 03 86 D6 DF   +....... ........
7890:  40 D3 E0 99 2B C2 D1 F8  89 86 E0 DF E9 1D 00 C7   @...+... ........
78A0:  86 F6 DF 03 00 8B 86 CE  DF 89 86 E4 DF B1 04 8B   ........ ........
78B0:  86 D6 DF D3 E0 05 08 00  89 86 E0 DF 8B 86 E4 DF   ........ ........
78C0:  8E 06 88 0D 26 A3 4A 84  8B 86 E0 DF 26 A3 4C 84   ....&.J. ....&.L.
78D0:  5E 5F 8B E5 5D CB 55 8B  EC 81 EC 22 20 57 56 C7   ^_..].U. ..." WV.
78E0:  86 E6 DF 01 00 E9 04 00  FF 86 E6 DF 8E 06 84 0D   ........ ........
78F0:  26 A1 36 02 48 3B 86 E6  DF 7F 03 E9 6A 02 C7 86   &.6.H;.. ....j...
7900:  E0 DF 01 00 E9 04 00 FF  86 E0 DF 8E 06 82 0D 26   ........ .......&
7910:  A1 22 02 48 3B 86 E0 DF  7F 03 E9 48 02 26 A1 22   .".H;... ...H.&."
7920:  02 F7 AE E6 DF 03 86 E0  DF 89 86 F8 DF C7 86 FA   ........ ........
7930:  DF 00 00 C7 86 FC DF 00  00 E9 04 00 FF 86 FC DF   ........ ........
```

```
7940:  83 BE FC DF 08 7C 03 E9  95 01 8E 06 82 0D 26 8B   .....|.. ......&.
7950:  1E 22 02 03 9E F8 DF 8E  06 86 0D 26 8A 87 ED 67   .״...... ...&...g
7960:  8A 8E FC DF BA 01 00 D3  E2 22 C2 2A E4 3D 01 00   ........ .".*.=..
7970:  1B C0 40 8E 06 82 0D 26  8B 1E 22 02 03 9E F8 DF   ..@....& ..".....
7980:  8E 06 86 0D 26 8A 8F EF  67 8B D1 8A 8E FC DF BB   ....&... g.......
7990:  01 00 D3 E3 22 D3 2A F6  83 FA 01 1B C9 41 03 C1   ....".*. .....A..
79A0:  8E 06 82 0D 26 8B 1E 22  02 03 9E F8 DF 8E 06 86   ....&.." ........
79B0:  0D 26 8A 8F EE 67 8B D1  8A 8E FC DF BB 01 00 D3   .&...g.. ........
79C0:  E3 22 D3 2A F6 83 FA 01  1B C9 41 03 C1 8B 9E F8   .".*.... ..A.....
79D0:  DF 8E 06 82 0D 26 2B 1E  22 02 8E 06 86 0D 26 8A   .....&+. ".....&.
79E0:  8F ED 67 8B D1 8A 8E FC  DF BB 01 00 D3 E3 22 D3   ..g..... ......".
79F0:  2A F6 83 FA 01 1B C9 41  03 C1 8B 9E F8 DF 8E 06   *......A ........
7A00:  82 0D 26 2B 1E 22 02 8E  06 86 0D 26 8A 8F EF 67   ..&+.".. ...&...g
7A10:  8B D1 8A 8E FC DF BB 01  00 D3 E3 22 D3 2A F6 83   ........ ...".*..
7A20:  FA 01 1B C9 41 03 C1 8B  9E F8 DF 8E 06 82 0D 26   ....A... .......&
7A30:  2B 1E 22 02 8E 06 86 0D  26 8A 8F EE 67 8B D1 8A   +."..... &...g...
7A40:  8E FC DF BB 01 00 D3 E3  22 D3 2A F6 83 FA 01 1B   ........ ".*.....
7A50:  C9 41 03 C1 8E 06 86 0D  8B 9E F8 DF 26 8A 8F ED   .A...... ....&...
7A60:  67 8B D1 8A 8E FC DF BB  01 00 D3 E3 22 D3 2A F6   g....... ....".*.
7A70:  83 FA 01 1B C9 41 03 C1  89 86 DE DF 8E 06 86 0D   .....A.. ........
7A80:  8B 9E F8 DF 26 8A 87 EF  67 8A 8E FC DF BA 01 00   ....&... g.......
7A90:  D3 E2 22 C2 2A E4 3D 01  00 1B C0 40 03 86 DE DF   ..".*.=. ...@....
7AA0:  8E 06 86 0D 8B 9E F8 DF  26 8A 8F EE 67 8B D1 8A   ........ &...g...
7AB0:  8E FC DF BB 01 00 D3 E3  22 D3 2A F6 83 FA 01 1B   ........ ".*.....
7AC0:  C9 41 03 C1 8B B6 FC DF  D1 E6 89 82 E8 DF 8B B6   .A...... ........
7AD0:  FC DF D1 E6 8B 82 E8 DF  01 86 FA DF E9 5D FE 83   ........ .....]..
7AE0:  BE FA DF 09 7C 03 E9 03  00 E9 1B FE B8 00 00 89   ....|... ........
7AF0:  86 E2 DF 89 86 E4 DF C7  86 FC DF 00 00 E9 04 00   ........ ........
7B00:  FF 86 FC DF 83 BE FC DF  08 7C 03 E9 3D 00 8B 9E   ........ .|..=...
7B10:  FC DF D1 E3 8B 87 7C 06  8B B6 FC DF D1 E6 F7 AA   ......|. ........
7B20:  E8 DF 99 F7 BE FA DF 01  86 E4 DF 8B 9E FC DF D1   ........ ........
7B30:  E3 8B 87 8C 06 8B B6 FC  DF D1 E6 F7 AA E8 DF 99   ........ ........
7B40:  F7 BE FA DF 01 86 E2 DF  E9 B5 FF 8B 86 E4 DF 8B   ........ ........
7B50:  C8 F7 E9 8B C8 8B 86 E2  DF 8B D8 F7 EB 03 C8 89   ........ ........
7B60:  4E FE E9 A2 FD E9 80 FD  5E 5F 8B E5 5D CB 55 8B   N....... ^_..].U.
7B70:  EC 81 EC 02 00 57 56 B8  01 00 50 9A 9E 40 96 07   .....WV. ..P..@..
7B80:  83 C4 02 9A B9 33 96 07  89 46 FE 3D 00 00 75 03   .....3.. .F.=..u.
7B90:  E9 06 00 8B 46 FE E9 A1  00 9A C1 1F 96 07 9A 25   ....F... .......%
7BA0:  21 96 07 83 3E 9E 06 00  74 03 E9 05 00 9A 1C 16   !...>... t.......
7BB0:  96 07 9A B9 33 96 07 89  46 FE 3D 00 00 75 03 E9   ....3... F.=..u..
7BC0:  06 00 8B 46 FE E9 72 00  B8 00 00 50 9A 9E 40 96   ...F..r. ...P..@.
7BD0:  07 83 C4 02 9A 46 3A 96  07 8E 06 8A 0D 26 83 3E   .....F:. .....&.>
7BE0:  DE 00 00 74 03 E9 26 00  B8 2A 84 B9 C2 13 51 50   ...t..&. .*....QP
7BF0:  B8 50 84 51 50 8E C1 26  FF 36 2C 84 B8 68 4E 1E   .P.QP..& .6,..hN.
7C00:  50 B8 E0 85 51 50 9A 3B  3E 96 07 83 C4 12 8E 06   P...QP.; >.......
7C10:  8A 0D 26 83 3E DE 00 00  75 03 E9 17 00 B8 00 00   ..&.>... u.......
7C20:  50 9A 1A 0B 55 00 83 C4  02 8E 06 8C 0D 26 A1 2C   P...U... .....&.,
7C30:  84 A3 9E 4D B8 00 00 E9  00 00 5E 5F 8B E5 5D CB   ...M.... ..^_..].
7C40:  55 8B EC 81 EC 00 00 57  56 8E 06 8C 0D 26 81 3E   U......W V....&.>
7C50:  2C 84 FA 00 7C 03 E9 16  00 26 83 3E 2C 84 28 7D   ,...|... .&.>,.(}
7C60:  03 E9 0B 00 26 83 3E 2A  84 78 7D 03 E9 06 00 B8   ....&.>* .x}.....
7C70:  00 00 E9 06 00 B8 01 00  E9 00 00 5E 5F 8B E5 5D   ........ ...^_..]
7C80:  CB 55 8B EC 81 EC 0E 00  57 56 B8 00 00 89 46 F6   .U...... WV....F.
7C90:  99 89 46 FA 89 56 FC C7  46 F4 00 00 E9 03 00 FF   ..F..V.. F.......
```

```
7CA0:  46 F4 8E 06 8C 0D 8B 46  F4 26 39 06 2A 84 7F 03   F......F .&9.*...
7CB0:  E9 6B 00 C7 46 FE FF FF  8B 5E F4 D1 E3 26 8B 87   .k..F... .^...&..
7CC0:  50 84 89 46 F8 83 7E F8  FF 74 03 E9 03 00 E9 CE   P..F..~. .t......
7CD0:  FF FF 76 F8 B8 E0 85 B9  C2 13 51 50 9A 06 00 55   ..v..... ..QP...U
7CE0:  00 83 C4 06 89 46 F8 40  75 03 E9 2E 00 B8 1A 00   .....F.@ u.......
7CF0:  F7 6E F8 8B D8 8E 06 8C  0D 26 8B 87 EA 85 89 46   .n...... .&.....F
7D00:  FE FF 46 F6 B8 1A 00 F7  6E F8 8B D8 26 8B 87 EE   ..F..... n...&...
7D10:  85 99 01 46 FA 11 56 FC  E9 B6 FF E9 81 FF 8B 46   ...F..V. .......F
7D20:  F6 3D 01 00 7C 03 E9 03  00 B8 01 00 99 52 50 FF   .=..|... .....RP.
7D30:  76 FC FF 76 FA 9A DA 2F  AB 10 89 46 F2 8B 46 F2   v..v.../ ...F..F.
7D40:  E9 00 00 5E 5F 8B E5 5D  CB 55 8B EC 81 EC 00 00   ...^_..] .U......
7D50:  57 56 FF 06 A6 06 8E 06  8C 0D A1 B0 06 26 39 06   WV...... .....&9.
7D60:  2C 84 7F 03 E9 07 00 26  A1 2C 84 A3 B0 06 8E 06   ,......& .,......
7D70:  8C 0D A1 B2 06 26 39 06  2A 84 7F 03 E9 07 00 26   .....&9. *......&
7D80:  A1 2A 84 A3 B2 06 8E 06  8C 0D 26 A1 2C 84 99 01   .*...... ..&.,...
7D90:  06 A8 06 11 16 AA 06 26  A1 2A 84 99 01 06 AC 06   .......& .*......
7DA0:  11 16 AE 06 83 3E AA 06  00 7D 03 E9 25 00 7E 03   .....>.. .}..%.~.
7DB0:  E9 0A 00 83 3E A8 06 00  77 03 E9 16 00 A1 A6 06   ....>... w.......
7DC0:  99 52 50 FF 36 AA 06 FF  36 A8 06 9A DA 2F AB 10   .RP.6... 6..../..
7DD0:  A3 9A 4D 83 3E AE 06 00  7D 03 E9 25 00 7E 03 E9   ..M.>... }..%.~..
7DE0:  0A 00 83 3E AC 06 00 77  03 E9 16 00 A1 A6 06 99   ...>...w ........
7DF0:  52 50 FF 36 AE 06 FF 36  AC 06 9A DA 2F AB 10 A3   RP.6...6 ..../...
7E00:  9C 4D 5E 5F 8B E5 5D CB  55 8B EC 81 EC 00 00 57   .M^_..]. U......W
7E10:  56 C7 06 68 4E 00 00 8E  06 8C 0D 26 C7 06 2C 84   V..hN... ...&..,.
7E20:  00 00 26 C7 06 2A 84 00  00 26 C7 06 4E 84 00 00   ..&..*.. .&..N...
7E30:  C7 06 92 4D 00 00 C7 06  94 4D 00 00 C7 06 96 4D   ...M.... .M.....M
7E40:  00 00 C7 06 98 4D 00 00  5E 5F 8B E5 5D CB 55 8B   .....M.. ^_..].U.
7E50:  EC 81 EC 06 00 57 56 81  3E 68 4E 1E 03 74 03 E9   .....WV. >hN..t..
7E60:  06 00 B8 FB FF E9 F6 01  8E 06 8C 0D 26 FF 06 2C   ........ ....&..,
7E70:  84 B8 1A 00 F7 2E 68 4E  8B D8 8B 46 06 26 89 87   ......hN ...F.&..
7E80:  E0 85 B8 1A 00 F7 2E 68  4E 8B D8 8B 46 08 26 89   .......h N...F.&.
7E90:  87 E2 85 26 A1 2A 84 8B  C8 B8 1A 00 F7 2E 68 4E   ...&.*.. ......hN
7EA0:  8B D8 26 89 8F F6 85 B8  1A 00 F7 2E 68 4E 8B D8   ..&..... ....hN..
7EB0:  26 83 8F F8 85 01 8B 46  06 99 33 C2 2B C2 B9 03   &......F ..3.+...
7EC0:  00 D3 F8 33 C2 2B C2 89  46 FE 8B 46 08 99 33 C2   ...3.+.. F..F..3.
7ED0:  2B C2 B9 03 00 D3 F8 33  C2 2B C2 89 46 FC 8E 06   +......3 .+..F...
7EE0:  8E 0D 8B 5E FC D1 E3 26  8B 87 1A 00 05 02 00 3B   ...^...& .......;
7EF0:  46 FE 7E 03 E9 3F 00 8B  5E FC D1 E3 26 8B 87 1A   F.~..?.. ^...&...
7F00:  01 2D 02 00 3B 46 FE 7D  03 E9 2A 00 8B 5E FE D1   .-..;F.} ..*..^..
7F10:  E3 26 8B 87 9A 00 05 02  00 3B 46 FC 7E 03 E9 15   .&...... .;F.~...
7F20:  00 8B 5E FE D1 E3 26 8B  87 9A 01 2D 02 00 3B 46   ..^...&. ...-..;F
7F30:  FC 7C 03 E9 13 00 B8 1A  00 F7 2E 68 4E 8B D8 8E   .|...... ...hN...
7F40:  06 8C 0D 26 83 A7 F8 85  FE 8B 46 06 B9 18 00 99   ...&.... ..F.....
7F50:  F7 F9 89 46 FE 8B 46 08  99 F7 F9 89 46 FC B8 1A   ...F..F. ....F...
7F60:  00 F7 2E 68 4E 8B D8 8E  06 8C 0D 8E 06 90 0D 26   ...hN... .......&
7F70:  A1 22 84 F7 6E FC 8B F0  03 76 FE 8E 06 92 0D 26   ."..n... .v.....&
7F80:  8A 84 6A 07 2A E4 B1 04  D3 E0 8E 06 8C 0D 26 32   ..j.*... ......&2
7F90:  87 F8 85 25 10 00 8B C8  B8 1A 00 F7 2E 68 4E 8B   ...%.... .....hN.
7FA0:  D8 26 31 8F F8 85 B8 1A  00 F7 2E 68 4E 8B D8 26   .&1..... ...hN..&
7FB0:  C7 87 E4 85 FF FF B8 1A  00 F7 2E 68 4E 8B D8 26   ........ ...hN..&
7FC0:  C7 87 E6 85 FF FF B8 1A  00 F7 2E 68 4E 8B D8 26   ........ ...hN..&
7FD0:  C7 87 E8 85 00 00 B8 1A  00 F7 2E 68 4E 8B D8 26   ........ ...hN..&
7FE0:  C7 87 EA 85 FF FF B8 1A  00 F7 2E 68 4E 8B D8 26   ........ ...hN..&
7FF0:  C7 87 EC 85 FF FF B8 1A  00 F7 2E 68 4E 8B D8 26   ........ ...hN..&
```

EXTRACT.DMP Thursday, January 6, 1994 12:02pm Page 39


```
8000: C7 87 EE 85 00 00 B8 1A  00 F7 2E 68 4E 8B D8 26   ........ ...hN..&
8010: C7 87 F0 85 FF FF B8 1A  00 F7 2E 68 4E 8B D8 26   ........ ...hN..&
8020: C7 87 F2 85 FF FF B8 1A  00 F7 2E 68 4E 8B D8 26   ........ ...hN..&
8030: C7 87 F4 85 00 00 B8 1A  00 F7 2E 68 4E 8B D8 26   ........ ...hN..&
8040: 83 A7 F8 85 F9 B8 1A 00  F7 2E 68 4E 8B D8 26 83   ........ ..hN..&.
8050: A7 F8 85 F7 A1 68 4E FF  06 68 4E E9 00 00 5E 5F   .....hN. .hN...^_
8060: 8B E5 5D CB 55 8B EC 81  EC 02 00 57 56 FF 76 08   ..].U... ...WV.v.
8070: FF 76 06 9A EE 02 96 07  83 C4 04 89 46 FE 3D FB   .v...... ....F.=.
8080: FF 74 03 E9 13 00 FF 0E  68 4E 8E 06 8C 0D 26 FF   .t...... hN....&.
8090: 0E 2C 84 B8 FF FF E9 19  00 8B 46 FE 8E 06 8C 0D   .,...... ..F.....
80A0: 26 8B 1E 2A 84 D1 E3 26  89 87 50 84 8B 46 FE E9   &..*...& ..P..F..
80B0: 00 00 5E 5F 8B E5 5D CB  55 8B EC 81 EC 00 00 57   ..^_..]. U......W
80C0: 56 B8 1A 00 F7 6E 06 8B  5E 08 8B CB D1 E3 03 D9   V....n.. ^.......
80D0: D1 E3 03 D8 8E 06 8C 0D  8B 46 0A 26 89 87 E4 85   ........ .F.&....
80E0: B8 1A 00 F7 6E 06 8B 5E  08 8B CB D1 E3 03 D9 D1   ....n..^ ........
80F0: E3 03 D8 8B 46 0E 26 89  87 E8 85 B8 1A 00 F7 6E   ....F.&. .......n
8100: 0A 8B D8 8B 46 0C 8B C8  D1 E0 03 C1 D1 E0 03 D8   ....F... ........
8110: 8B 46 06 26 89 87 E4 85  B8 1A 00 F7 6E 0A 8B D8   .F.&.... ....n...
8120: 8B 46 0C 8B C8 D1 E0 03  C1 D1 E0 03 D8 8B 46 0E   .F...... ......F.
8130: 26 89 87 E8 85 5E 5F 8B  E5 5D CB 55 8B EC 81 EC   &....^_. .].U....
8140: 06 00 57 56 FF 76 08 FF  76 06 9A EE 02 96 07 83   ..WV.v.. v.......
8150: C4 04 89 46 FA FF 76 08  FF 76 06 9A EE 02 96 07   ...F..v. .v......
8160: 83 C4 04 89 46 FC B8 1A  00 F7 6E 0A 8B D8 8E 06   ....F... ..n.....
8170: 8C 0D 26 8B 87 F6 85 8B  C8 B8 1A 00 F7 6E FA 8B   ..&..... .....n..
8180: D8 26 89 8F F6 85 B8 1A  00 F7 6E 0A 8B D8 26 8B   .&...... ..n...&.
8190: 87 F6 85 8B C8 B8 1A 00  F7 6E FC 8B D8 26 89 8F   ........ .n...&..
81A0: F6 85 B8 1A 00 F7 6E FA  8B D8 26 83 8F F8 85 08   ......n. ..&.....
81B0: B8 00 00 50 B9 01 00 51  FF 76 FC BA 02 00 52 FF   ...P...Q .v....R.
81C0: 76 FA 9A 58 05 96 07 83  C4 0A B8 1A 00 F7 6E 0A   v..X.... ......n.
81D0: 8B D8 8E 06 8C 0D 8B 46  10 26 39 87 EA 85 74 03   .......F .&9...t.
81E0: E9 79 00 B8 1A 00 F7 6E  FA 8B D8 8B 46 12 26 89   .y.....n ....F.&.
81F0: 87 EC 85 B8 1A 00 F7 6E  FA 8B D8 8B 46 0C 26 89   .......n ....F.&.
8200: 87 E6 85 B8 1A 00 F7 6E  10 8B D8 8E 06 8C 0D 8B   .......n ........
8210: 46 0A 26 39 87 E4 85 74  03 E9 06 00 B8 00 00 E9   F.&9...t ........
8220: 03 00 B8 02 00 89 46 FE  FF 76 14 B8 01 00 50 FF   ......F. .v....P.
8230: 76 FA FF 76 FE FF 76 10  9A 58 05 96 07 83 C4 0A   v..v..v. .X......
8240: FF 76 0E B8 01 00 50 FF  76 0A B8 00 00 50 FF 76   .v....P. v....P.v
8250: FA 9A 58 05 96 07 83 C4  0A E9 A7 00 B8 1A 00 F7   ..X..... ........
8260: 6E 10 8B D8 8E 06 8C 0D  8B 46 0A 26 39 87 EA 85   n....... .F.&9...
8270: 74 03 E9 79 00 B8 1A 00  F7 6E FA 8B D8 8B 46 0C   t..y.... .n....F.
8280: 26 89 87 EC 85 B8 1A 00  F7 6E FA 8B D8 8B 46 12   &....... .n....F.
8290: 26 89 87 E6 85 B8 1A 00  F7 6E 0A 8B D8 8E 06 8C   &....... .n......
82A0: 0D 8B 46 10 26 39 87 E4  85 74 03 E9 06 00 B8 00   ..F.&9.. .t......
82B0: 00 E9 03 00 B8 02 00 89  46 FE FF 76 0E B8 01 00   ........ F..v....
82C0: 50 FF 76 FA FF 76 FE FF  76 0A 9A 58 05 96 07 83   P.v..v.. v..X....
82D0: C4 0A FF 76 14 B8 01 00  50 FF 76 10 B8 00 00 50   ...v.... P.v....P
82E0: FF 76 FA 9A 58 05 96 07  83 C4 0A E9 15 00 83 2E   .v..X... ........
82F0: 68 4E 02 8E 06 8C 0D 26  83 2E 2C 84 02 B8 FF FF   hN.....& ..,.....
8300: E9 00 00 5E 5F 8B E5 5D  CB 55 8B EC 81 EC 10 00   ...^_..] .U......
8310: 57 56 B8 1A 00 F7 6E 06  8B D8 8E 06 8C 0D 26 8B   WV....n. ......&.
8320: 87 EA 85 89 46 F2 B8 1A  00 F7 6E 06 8B D8 26 8B   ....F... ..n...&.
8330: 87 E4 85 89 46 F4 B8 1A  00 F7 6E 06 8B D8 26 8B   ....F... ..n...&.
8340: 87 F0 85 89 46 F0 83 7E  F4 00 7D 03 E9 0F 00 83   ....F..~ ..}.....
8350: 7E F0 00 7D 03 E9 06 00  8B 46 06 E9 01 02 83 7E   ~..}.... .F.....~
```

```
8360:  F2 00 7D 03 E9 A9 01 B8  1A 00 F7 6E F2 8B D8 8E   ..}..... ...n....
8370:  06 8C 0D 8B 46 06 26 39  87 E4 85 74 03 E9 44 00   ....F.&9 ...t..D.
8380:  B8 1A 00 F7 6E F2 8B D8  8B 46 06 26 39 87 F0 85   ....n... .F.&9...
8390:  74 03 E9 2F 00 B8 1A 00  F7 6E F2 8B D8 26 C7 87   t../.... .n...&..
83A0:  E4 85 FF FF B8 1A 00 F7  6E F2 8B D8 26 C7 87 F0   ........ n...&...
83B0:  85 FF FF B8 1A 00 F7 6E  F2 8B D8 26 83 A7 F8 85   .......n ...&....
83C0:  F7 E9 49 01 83 7E F4 00  7C 03 E9 4A 00 83 7E F0   ..I..~.. |..J..~.
83D0:  00 7C 03 E9 41 00 B8 1A  00 F7 6E F2 8B D8 8E 06   .|..A... ..n.....
83E0:  8C 0D 8B 46 06 26 39 87  E4 85 74 03 E9 12 00 B8   ...F.&9. ..t.....
83F0:  1A 00 F7 6E F2 8B D8 26  C7 87 E4 85 FF FF E9 13   ...n...& ........
8400:  00 B8 1A 00 F7 6E F2 8B  D8 8E 06 8C 0D 26 C7 87   .....n.. .....&..
8410:  F0 85 FF FF E9 F6 00 83  7E F0 00 7D 03 E9 06 00   ........ ~..}....
8420:  B8 02 00 E9 03 00 B8 00  00 89 46 F6 B8 1A 00 F7   ........ ..F.....
8430:  6E 06 8B D8 8B 46 F6 8B  C8 D1 E0 03 C1 D1 E0 03   n....F.. ........
8440:  D8 8E 06 8C 0D 26 8B 87  E4 85 89 46 FE B8 1A 00   .....&.. ...F....
8450:  F7 6E 06 8B D8 8B 46 F6  8B C8 D1 E0 03 C1 D1 E0   .n....F. ........
8460:  03 D8 26 8B 87 E8 85 8B  C8 B8 1A 00 F7 6E 06 8B   ..&..... .....n..
8470:  D8 26 03 8F EE 85 89 4E  FC B8 1A 00 F7 6E F2 8B   .&.....N .....n..
8480:  D8 8E 06 8C 0D 8B 46 06  26 39 87 E4 85 74 03 E9   ......F. &9...t..
8490:  06 00 B8 00 00 E9 03 00  B8 02 00 89 46 FA 8B 46   ........ ....F..F
84A0:  FE 39 46 06 74 03 E9 0F  00 8B 46 F2 89 46 FE 8B   .9F.t... ..F..F..
84B0:  46 FA 89 46 F8 E9 3E 00  C7 46 F8 00 00 E9 03 00   F..F..>. .F......
84C0:  FF 46 F8 83 7E F8 02 7C  03 E9 2A 00 B8 1A 00 F7   .F..~..| ..*.....
84D0:  6E FE 8B 5E F8 8B CB D1  E3 03 D9 D1 E3 03 D8 8E   n..^.... ........
84E0:  06 8C 0D 8B 46 06 26 39  87 E4 85 74 03 E9 03 00   ....F.&9 ...t....
84F0:  E9 03 00 E9 CA FF FF 76  FC FF 76 F8 FF 76 FE FF   .......v ..v..v..
8500:  76 FA FF 76 F2 9A 58 05  96 07 83 C4 0A E9 1A 00   v..v..X. ........
8510:  B8 1A 00 F7 6E 06 8B D8  8E 06 8C 0D 26 8B 9F F6   ....n... ....&...
8520:  85 D1 E3 26 C7 87 50 84  FF FF A1 68 4E 2B 46 06   ...&..P. ...hN+F.
8530:  48 74 03 E9 07 00 FF 0E  68 4E E9 13 00 B8 1A 00   Ht...... hN......
8540:  F7 6E 06 8B D8 8E 06 8C  0D 26 C7 87 E0 85 FF FF   .n...... .&......
8550:  8E 06 8C 0D 26 FF 0E 2C  84 8B 46 F2 E9 00 00 5E   ....&.., ..F....^
8560:  5F 8B E5 5D CB 55 8B EC  81 EC 04 00 57 56 8E 06   _..].U.. ....WV..
8570:  8C 0D 26 8B 1E 2A 84 D1  E3 26 8B 87 50 84 89 46   ..&..*.. .&..P..F
8580:  FE B8 1A 00 F7 6E FE 8B  D8 26 8B 87 E4 85 89 46   .....n.. .&.....F
8590:  FC 83 7E FC 00 7D 03 E9  26 00 B8 1A 00 F7 6E FE   ..~..}.. &.....n.
85A0:  8B D8 26 83 BF E8 85 05  7C 03 E9 2C 00 B8 1A 00   ..&..... |..,....
85B0:  F7 6E FC 8B D8 26 83 BF  E4 85 00 7C 03 E9 19 00   .n...&.. ...|....
85C0:  A1 94 4D A3 68 4E A1 92  4D 8E 06 8C 0D 26 A3 2C   ..M.hN.. M....&.,
85D0:  84 26 FF 06 4E 84 E9 16  00 8E 06 8C 0D 26 FF 06   .&..N... .....&..
85E0:  2A 84 A1 68 4E A3 94 4D  26 A1 2C 84 A3 92 4D 8E   *..hN..M &.,...M.
85F0:  06 8C 0D 26 81 3E 2A 84  C7 00 74 03 E9 06 00 B8   ...&.>*. ..t.....
8600:  FF FF E9 06 00 B8 00 00  E9 00 00 5E 5F 8B E5 5D   ........ ...^_..]
8610:  CB 55 8B EC 81 EC 00 00  57 56 83 7E 08 00 75 03   .U...... WV.~..u.
8620:  E9 39 00 B8 1A 00 F7 6E  06 8B D8 8E 06 8C 0D 26   .9.....n .......&
8630:  83 BF E6 85 00 7C 03 E9  1F 00 B8 00 00 50 9A 32   .....|.. .....P.2
8640:  35 BC 0B 83 C4 02 8B C8  B8 1A 00 F7 6E 06 8B D8   5....... ....n...
8650:  8E 06 8C 0D 26 89 8F E6  85 E9 36 00 B8 1A 00 F7   ....&... ..6.....
8660:  6E 06 8B D8 8E 06 8C 0D  26 83 BF F2 85 00 7C 03   n....... &.....|.
8670:  E9 1F 00 B8 00 00 50 9A  32 35 BC 0B 83 C4 02 8B   ......P. 25......
8680:  C8 B8 1A 00 F7 6E 06 8B  D8 8E 06 8C 0D 26 89 8F   .....n.. .....&..
8690:  F2 85 5E 5F 8B E5 5D CB  55 8B EC 81 EC 02 00 57   ..^_..]. U......W
86A0:  56 83 7E 0E 00 75 03 E9  39 00 B8 1A 00 F7 6E 0A   V.~..u.. 9.....n.
86B0:  8B D8 8E 06 8C 0D 26 83  BF E6 85 00 7C 03 E9 1F   ......&. ....|...
```

```
86C0:  00 B8 00 00 50 9A 32 35  BC 0B 83 C4 02 8B C8 B8   ....P.25 ........
86D0:  1A 00 F7 6E 0A 8B D8 8E  06 8C 0D 26 89 8F E6 85   ...n.... ...&....
86E0:  E9 36 00 B8 1A 00 F7 6E  0A 8B D8 8E 06 8C 0D 26   .6.....n .......&
86F0:  83 BF F2 85 00 7C 03 E9  1F 00 B8 00 00 50 9A 32   .....|.. .....P.2
8700:  35 BC 0B 83 C4 02 8B C8  B8 1A 00 F7 6E 0A 8B D8   5....... ....n...
8710:  8E 06 8C 0D 26 89 8F F2  85 FF 76 08 FF 76 06 9A   ....&... ..v..v..
8720:  EE 02 96 07 83 C4 04 89  46 FE 3D FB FF 74 03 E9   ........ F.=..t..
8730:  06 00 B8 FB FF E9 5F 00  B8 01 00 50 9A 32 35 BC   ......_. ...P.25.
8740:  0B 83 C4 02 8B C8 B8 1A  00 F7 6E FE 8B D8 8E 06   ........ ..n.....
8750:  8C 0D 26 89 8F EC 85 FF  76 0C B8 01 00 50 FF 76   ..&..... v....P.v
8760:  FE 83 7E 0E 01 1B C0 25  02 00 50 FF 76 0A 9A 58   ..~....% ..P.v..X
8770:  05 96 07 83 C4 0A 83 7E  10 00 74 03 E9 12 00 B8   .......~ ..t.....
8780:  1A 00 F7 6E FE 8B D8 8E  06 8C 0D 26 83 8F F8 85   ...n.... ...&....
8790:  08 8B 46 FE E9 00 00 5E  5F 8B E5 5D CB 55 8B EC   ..F....^ _..].U..
87A0:  81 EC 00 00 57 56 B8 1A  00 F7 6E 06 8B D8 8E 06   ....WV.. ..n.....
87B0:  8C 0D B8 1A 00 26 F7 AF  EA 85 8B D8 8E 06 8C 0D   .....&.. ........
87C0:  8B 46 06 26 39 87 F0 85  74 03 E9 06 00 B8 01 00   .F.&9... t.......
87D0:  E9 03 00 B8 00 00 E9 00  00 5E 5F 8B E5 5D CB 55   ........ .^_..].U
87E0:  8B EC 81 EC 0C 00 57 56  C7 46 F6 00 00 C7 46 F8   ......WV .F....F.
87F0:  00 00 E9 03 00 FF 46 F8  A1 9E 4D 39 46 F8 7C 03   ......F. ..M9F.|.
8800:  E9 A3 00 8E 06 8C 0D 8B  5E F8 8B C3 D1 E3 03 D8   ........ ^.......
8810:  D1 E3 26 8B 87 20 D7 89  46 FA 8B 46 06 2B 46 0A   ..&.. .. F..F.+F.
8820:  3B 46 FA 7F 03 E9 06 00  E9 CA FF E9 75 00 8B 46   ;F...... ....u..F
8830:  06 03 46 0A 3B 46 FA 7C  03 E9 09 00 8B 46 F6 E9   ..F.;F.| .....F..
8840:  6A 00 E9 5E 00 8E 06 8C  0D 8B 5E F8 8B C3 D1 E3   j..^.... ..^.....
8850:  03 D8 D1 E3 26 8B 87 24  D7 89 46 F4 B8 1A 00 F7   ....&..$ ..F.....
8860:  6E F4 05 E0 85 89 46 FC  8C 46 FE C4 5E FC 26 83   n.....F. .F..^.&.
8870:  3F 00 7F 03 E9 2C 00 C4  5E FC 26 8B 47 02 2B 46   ?....,.. ^.&.G.+F
8880:  08 50 9A 04 2F AB 10 83  C4 02 3B 46 0C 7E 03 E9   .P../... ..;F.~..
8890:  11 00 8B 5E F6 D1 E3 C4  76 0E 8B 46 F4 26 89 00   ...^.... v..F.&..
88A0:  FF 46 F6 E9 4F FF 8B 46  F6 E9 00 00 5E 5F 8B E5   .F..O..F ....^_..
88B0:  5D CB 55 8B EC 81 EC 04  00 57 56 8E 06 8C 0D 8B   ].U..... .WV.....
88C0:  5E 06 D1 E3 26 8B 87 50  84 89 46 FE 83 7E FE 00   ^...&..P ..F..~..
88D0:  7C 03 E9 06 00 B8 FF FF  E9 ED 00 B8 1A 00 F7 6E   |....... .......n
88E0:  FE 8B D8 8E 06 8C 0D 26  83 BF E8 85 0F 7D 03 E9   .......& .....}..
88F0:  06 00 8B 46 FE E9 D0 00  8B 46 FE 89 46 FC FF 76   ...F.... .F..F..v
8900:  FC B8 E0 85 B9 C2 13 51  50 9A 06 00 55 00 83 C4   .......Q P...U...
8910:  06 89 46 FC 3D 00 00 7D  03 E9 43 00 B8 1A 00 F7   ..F.=..} ..C.....
8920:  6E FC 8B D8 8E 06 8C 0D  26 83 BF E4 85 00 7C 03   n....... &.....|.
8930:  E9 29 00 B8 1A 00 F7 6E  FC 8B D8 26 83 BF F0 85   .).....n ...&....
8940:  00 7C 03 E9 16 00 B8 1A  00 F7 6E FC 8B D8 26 F6   .|...... ..n...&.
8950:  87 F8 85 06 74 03 E9 03  00 E9 03 00 E9 9F FF 83   ....t... ........
8960:  7E FC 00 7C 03 E9 06 00  B8 FF FF E9 5A 00 B8 FF   ~..|.... ....Z...
8970:  FF 50 FF 76 FC B9 E0 85  BA C2 13 52 51 9A EC 03   .P.v.... ...RQ...
8980:  55 00 83 C4 08 8B 46 FC  8E 06 8C 0D 8B 5E 06 D1   U.....F. .....^..
8990:  E3 26 89 87 50 84 B8 1A  00 F7 6E FE 8B D8 26 F6   .&..P... ..n...&.
89A0:  87 F8 85 06 74 03 E9 19  00 FF 76 FE 9A 6E 0E 96   ....t... ..v..n..
89B0:  07 83 C4 02 3D 00 00 7C  03 E9 06 00 B8 FF FF E9   ....=..| ........
89C0:  06 00 8B 46 FC E9 00 00  5E 5F 8B E5 5D CB 55 8B   ...F.... ^_..].U.
89D0:  EC 81 EC 04 00 57 56 B8  1A 00 F7 6E 06 8B D8 8E   .....WV. ...n....
89E0:  06 8C 0D 26 8B 87 EA 85  89 46 FC B8 1A 00 F7 6E   ...&.... .F.....n
89F0:  FC 8B D8 26 8B 87 EA 85  89 46 FE FF 76 06 9A A9   ...&.... .F..v...
8A00:  07 96 07 83 C4 02 FF 76  FC 9A A9 07 96 07 83 C4   .......v ........
8A10:  02 8E 06 8C 0D 26 FF 06  4E 84 8B 46 FE E9 00 00   .....&.. N..F....
```

EXTRACT.DMP Thursday, January 6, 1994 12:02pm Page 42


```
8A20:  5E 5F 8B E5 5D CB 55 8B  EC 81 EC 16 00 57 56 C7   ^_..].U. .....WV.
8A30:  46 EE 00 00 E9 03 00 FF  46 EE 8B 46 EE 39 06 98   F....... F..F.9..
8A40:  4D 7F 03 E9 2F 00 8B 5E  EE D1 E3 D1 E3 8B 46 06   M.../..^ ......F.
8A50:  39 87 52 4C 75 03 E9 13  00 8B 5E EE D1 E3 D1 E3   9.RLu... ..^.....
8A60:  8B 46 06 39 87 54 4C 74  03 E9 06 00 8B 46 06 E9   .F.9.TLt .....F..
8A70:  1D 02 E9 C2 FF B8 06 00  89 46 F2 89 46 F0 B8 1A   ........ .F..F...
8A80:  00 F7 6E 06 8B D8 8E 06  8C 0D 26 8B 87 E0 85 89   ..n..... ..&.....
8A90:  46 FA B8 1A 00 F7 6E 06  8B D8 26 8B 87 E2 85 89   F.....n. ..&.....
8AA0:  46 FC C7 46 FE FF FF C7  46 F8 FF FF A1 96 4D 48   F..F.... F.....MH
8AB0:  89 46 EE E9 03 00 FF 4E  EE 83 7E EE 00 7D 03 E9   .F.....N ..~..}..
8AC0:  86 00 8B 5E EE D1 E3 8B  87 A0 4D 89 46 EC 83 7E   ...^.... ..M.F..~
8AD0:  EC 00 7D 03 E9 6E 00 B8  1A 00 F7 6E EC 8B D8 8E   ..}..n.. ...n....
8AE0:  06 8C 0D 26 8B 87 E0 85  2B 46 FA 50 9A 04 2F AB   ...&.... +F.P../.
8AF0:  10 83 C4 02 89 46 F4 B8  1A 00 F7 6E EC 8B D8 8E   .....F.. ...n....
8B00:  06 8C 0D 26 8B 87 E2 85  2B 46 FC 50 9A 04 2F AB   ...&.... +F.P../.
8B10:  10 83 C4 02 89 46 F6 8B  46 F0 39 46 F4 7C 03 E9   .....F.. F.9F.|..
8B20:  23 00 8B 46 F2 39 46 F6  7C 03 E9 18 00 8B 46 F4   #..F.9F. |.....F.
8B30:  8B 56 F6 89 46 F0 89 56  F2 8B 46 EC 89 46 FE 8B   .V..F..V ..F..F..
8B40:  46 EE 89 46 F8 E9 6E FF  83 7E FE 00 7C 03 E9 5E   F..F..n. .~..|..^
8B50:  00 83 3E 96 4D 64 7C 03  E9 17 00 8B 46 06 8B 1E   ..>.Md|. ....F...
8B60:  96 4D D1 E3 89 87 A0 4D  FF 06 96 4D 8B 46 06 E9   .M.....M ...M.F..
8B70:  1D 01 B8 1A 00 F7 6E 06  8B D8 8E 06 8C 0D 26 83   ......n. ......&.
8B80:  BF EE 85 0F 7C 03 E9 0E  00 FF 76 06 9A 6E 0E 96   ....|... ..v..n..
8B90:  07 83 C4 02 E9 12 00 B8  1A 00 F7 6E 06 8B D8 8E   ........ ...n....
8BA0:  06 8C 0D 26 83 A7 F8 85  F9 8B 46 06 E9 E0 00 A1   ...&.... ..F.....
8BB0:  96 4D 2B 46 F8 48 75 03  E9 2D 00 8B 46 F8 89 46   .M+F.Hu. .-..F..F
8BC0:  EE E9 03 00 FF 46 EE 8B  46 EE 39 06 96 4D 7F 03   .....F.. F.9..M..
8BD0:  E9 15 00 8B 5E EE D1 E3  8B 87 A2 4D 8B 5E EE D1   ....^... ...M.^..
8BE0:  E3 89 87 A0 4D E9 DC FF  FF 0E 96 4D B8 1A 00 F7   ....M... ...M....
8BF0:  6E FE 8B D8 8E 06 8C 0D  26 8B 87 EE 85 8B C8 B8   n....... &.......
8C00:  1A 00 F7 6E 06 8B D8 26  03 8F EE 85 89 4E EA 83   ...n...& .....N..
8C10:  7E EA 14 7D 03 E9 35 00  83 3E 98 4D 50 7C 03 E9   ~..}..5. .>.MP|..
8C20:  2B 00 8B 46 06 8B 1E 98  4D D1 E3 D1 E3 89 87 52   +..F.... M......R
8C30:  4C 8B 46 FE 8B 1E 98 4D  D1 E3 D1 E3 89 87 54 4C   L.F....M ......TL
8C40:  FF 06 98 4D 8B 46 06 E9  45 00 E9 42 00 FF 76 FE   ...M.F.. E..B..v.
8C50:  9A 6E 0E 96 07 83 C4 02  B8 1A 00 F7 6E 06 8B D8   .n...... ....n...
8C60:  8E 06 8C 0D 26 83 BF EE  85 0F 7C 03 E9 0E 00 FF   ....&... ..|.....
8C70:  76 06 9A 6E 0E 96 07 83  C4 02 E9 12 00 B8 1A 00   v..n.... ........
8C80:  F7 6E 06 8B D8 8E 06 8C  0D 26 83 A7 F8 85 F9 5E   .n...... .&.....^
8C90:  5F 8B E5 5D CB 55 8B EC  81 EC 12 00 57 56 B8 1A   _..].U.. ....WV..
8CA0:  00 F7 6E 06 8B D8 8E 06  8C 0D 26 8B 87 E4 85 89   ..n..... ..&.....
8CB0:  46 F4 B8 1A 00 F7 6E 06  8B D8 26 8B 87 F0 85 89   F.....n. ..&.....
8CC0:  46 F2 83 7E F4 FF 75 03  E9 10 00 B8 1A 00 F7 6E   F..~..u. .......n
8CD0:  06 8B D8 26 8B 87 E8 85  89 46 F0 83 7E F2 FF 75   ...&.... .F..~..u
8CE0:  03 E9 14 00 B8 1A 00 F7  6E 06 8B D8 8E 06 8C 0D   ........ n.......
8CF0:  26 8B 87 F4 85 89 46 FC  83 7E F4 FF 75 03 E9 AE   &.....F. .~..u...
8D00:  01 83 7E F2 FF 75 03 E9  A5 01 B8 1A 00 F7 6E 06   ..~..u.. ......n.
8D10:  8B D8 8E 06 8C 0D 26 8B  87 E6 85 89 46 EE B8 1A   ......&. ....F...
8D20:  00 F7 6E 06 8B D8 26 8B  87 EC 85 89 46 FE B8 1A   ..n...&. ....F...
8D30:  00 F7 6E 06 8B D8 26 8B  87 F2 85 89 46 FA 81 7E   ..n...&. ....F..~
8D40:  FE B4 00 7C 03 E9 08 00  81 46 FE B4 00 E9 05 00   ...|.... .F......
8D50:  81 6E FE B4 00 8B 46 EE  2B 46 FE 50 9A 04 2F AB   .n....F. +F.P../.
8D60:  10 83 C4 02 89 46 F8 81  7E F8 B4 00 7F 03 E9 09   .....F.. ~.......
8D70:  00 B8 68 01 2B 46 F8 89  46 F8 8B 46 FA 2B 46 FE   ..h.+F.. F..F.+F.
```

```
8D80:  50 9A 04 2F AB 10 83 C4  02 89 46 F6 81 7E F6 B4   P../.... ..F..~..
8D90:  00 7F 03 E9 09 00 B8 68  01 2B 46 F6 89 46 F6 8B   .......h .+F..F..
8DA0:  46 FC 39 46 0A 7F 03 E9  88 00 8B 46 F8 39 46 F6   F.9F.... ...F.9F.
8DB0:  7E 03 E9 0B 00 8B 46 F0  39 46 0A 7E 03 E9 72 00   ~.....F. 9F.~..r.
8DC0:  83 7E 08 00 74 03 E9 30  00 B8 1A 00 F7 6E F2 8B   .~..t..0 .....n..
8DD0:  D8 8E 06 8C 0D 26 83 BF  E4 85 FF 74 03 E9 19 00   .....&.. ...t....
8DE0:  B8 1A 00 F7 6E F2 8B D8  26 83 BF F0 85 FF 74 03   ....n... &.....t.
8DF0:  E9 06 00 B8 02 00 E9 BC  00 83 7E 08 01 74 03 E9   ........ ..~..t..
8E00:  30 00 B8 1A 00 F7 6E F2  8B D8 8E 06 8C 0D 26 83   0.....n. ......&.
8E10:  BF E4 85 FF 75 03 E9 19  00 B8 1A 00 F7 6E F2 8B   ....u... .....n..
8E20:  D8 26 83 BF F0 85 FF 75  03 E9 06 00 B8 02 00 E9   .&.....u ........
8E30:  83 00 8B 46 F0 39 46 0A  7F 03 E9 72 00 83 7E 08   ...F.9F. ...r..~.
8E40:  00 74 03 E9 30 00 B8 1A  00 F7 6E F4 8B D8 8E 06   .t..0... ..n.....
8E50:  8C 0D 26 83 BF E4 85 FF  74 03 E9 19 00 B8 1A 00   ..&..... t.......
8E60:  F7 6E F4 8B D8 26 83 BF  F0 85 FF 74 03 E9 06 00   .n...&.. ...t....
8E70:  B8 00 00 E9 3F 00 83 7E  08 01 74 03 E9 30 00 B8   ....?..~ ..t..0..
8E80:  1A 00 F7 6E F4 8B D8 8E  06 8C 0D 26 83 BF E4 85   ...n.... ...&....
8E90:  FF 75 03 E9 19 00 B8 1A  00 F7 6E F4 8B D8 26 83   .u...... ..n...&.
8EA0:  BF F0 85 FF 75 03 E9 06  00 B8 00 00 E9 06 00 B8   ....u... ........
8EB0:  FF FF E9 00 00 5E 5F 8B  E5 5D CB 55 8B EC 81 EC   .....^_. .].U....
8EC0:  0A 00 57 56 B8 1A 00 F7  6E 06 8B D8 8E 06 8C 0D   ..WV.... n.......
8ED0:  26 8B 87 E4 85 89 46 F8  B8 1A 00 F7 6E 06 8B D8   &.....F. ....n...
8EE0:  26 8B 87 F0 85 89 46 F6  B8 00 00 89 46 FA 89 46   &.....F. ....F..F
8EF0:  FE 83 7E F8 00 7C 03 E9  2A 00 83 7E F6 00 7C 03   ..~..|.. *..~..|.
8F00:  E9 21 00 B8 1A 00 F7 6E  06 8B D8 26 83 BF EE 85   .!.....n ...&....
8F10:  0F 7C 03 E9 0E 00 FF 76  06 9A DD 15 96 07 83 C4   .|.....v ........
8F20:  02 E9 56 00 B8 0F 00 50  B8 00 00 50 FF 76 06 9A   ..V....P ...P.v..
8F30:  35 11 96 07 83 C4 06 89  46 FC 8B 46 FC E9 29 00   5....... F..F..).
8F40:  FF 76 F6 9A DD 15 96 07  83 C4 02 C7 46 FA 01 00   .v...... ....F...
8F50:  E9 27 00 FF 76 F8 9A DD  15 96 07 83 C4 02 C7 46   .'..v... .......F
8F60:  FE 01 00 E9 14 00 E9 11  00 0B C0 75 03 E9 E3 FF   ........ ...u....
8F70:  48 48 75 03 E9 C9 FF E9  00 00 83 7E F8 FF 75 03   HHu..... ...~..u.
8F80:  E9 14 00 83 7E FE 00 74  03 E9 0B 00 FF 76 F8 9A   ....~..t .....v..
8F90:  5B 13 96 07 83 C4 02 83  7E F6 FF 75 03 E9 14 00   [....... ~..u....
8FA0:  83 7E FA 00 74 03 E9 0B  00 FF 76 F6 9A 5B 13 96   .~..t... ..v..[..
8FB0:  07 83 C4 02 5E 5F 8B E5  5D CB 55 8B EC 81 EC 0C   ....^_.. ].U.....
8FC0:  00 57 56 B8 1A 00 F7 6E  06 8B D8 8E 06 8C 0D 26   .WV....n .......&
8FD0:  8B 87 E4 85 89 46 F8 B8  1A 00 F7 6E 06 8B D8 26   .....F.. ...n...&
8FE0:  8B 87 F0 85 89 46 F6 83  7E F8 00 7C 03 E9 31 01   .....F.. ~..|..1.
8FF0:  83 7E F6 00 7C 03 E9 28  01 B8 1A 00 F7 6E 06 8B   .~..|..( .....n..
9000:  D8 26 F6 87 F8 85 06 75  03 E9 0E 00 FF 76 06 9A   .&.....u .....v..
9010:  C6 0E 96 07 83 C4 02 E9  04 01 B8 1A 00 F7 6E 06   ........ ......n.
9020:  8B D8 8E 06 8C 0D 26 83  BF EE 85 0F 7C 03 E9 ED   ......&. ....|...
9030:  00 B8 1A 00 F7 6E 06 8B  D8 26 8B 87 EA 85 89 46   .....n.. .&.....F
9040:  FA B8 1A 00 F7 6E FA 8B  D8 26 8B 87 EC 85 89 46   .....n.. .&.....F
9050:  FE B8 1A 00 F7 6E FA 8B  D8 8E 06 8C 0D 8B 46 06   .....n.. ......F.
9060:  26 39 87 F0 85 74 03 E9  14 00 B8 1A 00 F7 6E FA   &9...t.. ......n.
9070:  8B D8 8E 06 8C 0D 26 8B  87 E6 85 E9 11 00 B8 1A   ......&. ........
9080:  00 F7 6E FA 8B D8 8E 06  8C 0D 26 8B 87 F2 85 89   ..n..... ..&.....
9090:  46 FC 83 3E A0 06 00 75  03 E9 77 00 8B 46 FE 2B   F..>...u ..w..F.+
90A0:  46 FC 50 9A 04 2F AB 10  83 C4 02 B9 68 01 99 F7   F.P../.. ....h...
90B0:  F9 8B 46 FE 2B 46 FC 50  8B F2 9A 04 2F AB 10 83   ..F.+F.P ..../...
90C0:  C4 02 B9 68 01 99 F7 F9  81 EA 68 01 F7 DA 3B D6   ...h.... ..h...;.
90D0:  7E 03 E9 1F 00 8B 46 FE  2B 46 FC 50 9A 04 2F AB   ~.....F. +F.P../.
```

```
90E0:  10 83 C4 02 B9 68 01 99  F7 F9 8B C2 2D 68 01 F7   .....h.. ....-h..
90F0:  D8 E9 17 00 8B 46 FE 2B  46 FC 50 9A 04 2F AB 10   .....F.+ F.P../..
9100:  83 C4 02 B9 68 01 99 F7  F9 8B C2 3D 78 00 7F 03   ....h... ...=x...
9110:  E9 0B 00 FF 76 06 9A 6E  0E 96 07 83 C4 02 E9 16   ....v..n ........
9120:  00 FF 76 F8 9A 5A 14 96  07 83 C4 02 FF 76 F6 9A   ..v..Z.. .....v..
9130:  5A 14 96 07 83 C4 02 5E  5F 8B E5 5D CB 55 8B EC   Z......^ _..].U..
9140:  81 EC 00 00 57 56 B8 1A  00 F7 6E 06 8B D8 8E 06   ....WV.. ..n.....
9150:  8C 0D 26 F6 87 F8 85 06  75 03 E9 0E 00 FF 76 06   ..&..... u.....v.
9160:  9A C6 0E 96 07 83 C4 02  E9 0B 00 FF 76 06 9A 6E   ........ ....v..n
9170:  0E 96 07 83 C4 02 5E 5F  8B E5 5D CB 55 8B EC 81   ......^_ ..].U...
9180:  EC 04 00 57 56 C7 46 FE  00 00 E9 03 00 FF 46 FE   ...WV.F. ......F.
9190:  8E 06 8C 0D 8B 46 FE 26  39 06 2A 84 7F 03 E9 AF   .....F.& 9.*.....
91A0:  00 8B 5E FE D1 E3 26 8B  87 50 84 89 46 FC 3D 00   ..^...&. .P..F.=.
91B0:  00 7C 03 E9 03 00 E9 D4  FF C7 06 96 4D 00 00 83   .|...... ....M...
91C0:  3E 9C 06 00 75 03 E9 0E  00 FF 76 FC 9A 5B 13 96   >...u... ..v..[..
91D0:  07 83 C4 02 E9 19 00 B8  1A 00 F7 6E FC 8B D8 8E   ........ ...n....
91E0:  06 8C 0D 26 FF B7 E4 85  9A 5A 14 96 07 83 C4 02   ...&.... .Z......
91F0:  83 3E 96 4D 00 7F 03 E9  53 00 FF 0E 96 4D 8B 1E   .>.M.... S....M..
9200:  96 4D D1 E3 8B 87 A0 4D  89 46 FC 3D 00 00 7D 03   .M.....M .F.=..}.
9210:  E9 37 00 B8 1A 00 F7 6E  FC 8B D8 8E 06 8C 0D 26   .7.....n .......&
9220:  83 BF EE 85 0F 7C 03 E9  0E 00 FF 76 FC 9A 6E 0E   .....|.. ...v..n.
9230:  96 07 83 C4 02 E9 12 00  B8 1A 00 F7 6E FC 8B D8   ........ ....n...
9240:  8E 06 8C 0D 26 83 A7 F8  85 F9 E9 A3 FF E9 3D FF   ....&... ......=.
9250:  5E 5F 8B E5 5D CB 55 8B  EC 81 EC 00 00 57 56 FF   ^_..].U. .....WV.
9260:  76 08 8E 06 8C 0D 8B 5E  06 D1 E3 26 FF B7 50 84   v......^ ...&..P.
9270:  9A 21 17 96 07 83 C4 04  E9 00 00 5E 5F 8B E5 5D   .!...... ...^_..]
9280:  CB 55 8B EC 81 EC 04 00  57 56 8B 46 06 89 46 FC   .U...... WV.F..F.
9290:  C7 46 FE 00 00 83 7E FC  00 7D 03 E9 4F 00 FF 46   .F....~. .}..O..F
92A0:  FE B8 1A 00 F7 6E FC 8B  D8 8E 06 8C 0D 8B 46 08   .....n.. ......F.
92B0:  26 89 87 F6 85 FF 76 FC  B8 E0 85 B9 C2 13 51 50   &.....v. ......QP
92C0:  9A 06 00 55 00 83 C4 06  89 46 FC 3D 00 00 7D 03   ...U.... .F.=..}.
92D0:  E9 1A 00 B8 1A 00 F7 6E  FC 8B D8 8E 06 8C 0D 8B   .......n ........
92E0:  46 08 26 89 87 F6 85 FF  46 FE E9 C8 FF 8B 46 FE   F.&..... F.....F.
92F0:  E9 00 00 5E 5F 8B E5 5D  CB 55 8B EC 81 EC 14 00   ...^_..] .U......
9300:  57 56 B8 1A 00 F7 6E 06  8B D8 8E 06 8C 0D 26 8B   WV....n. ......&.
9310:  87 EA 85 89 46 F2 B8 1A  00 F7 6E 08 8B D8 26 8B   ....F... ..n...&.
9320:  87 EA 85 89 46 F0 B8 1A  00 F7 6E 06 8B D8 26 8B   ....F... ..n...&.
9330:  87 F6 85 89 46 FE B8 1A  00 F7 6E 08 8B D8 26 8B   ....F... ..n...&.
9340:  87 F6 85 89 46 FA B8 1A  00 F7 6E 06 8B D8 26 8B   ....F... ..n...&.
9350:  87 E4 85 89 46 FC B8 1A  00 F7 6E 08 8B D8 26 8B   ....F... ..n...&.
9360:  87 E4 85 89 46 F6 83 7E  F2 00 7C 03 E9 BA 01 83   ....F..~ ..|.....
9370:  7E F0 00 7C 03 E9 DC 00  FF 76 FE FF 76 FA 9A F6   ~..|.... .v..v...
9380:  16 96 07 83 C4 04 B8 1A  00 F7 6E 08 8B D8 8E 06   ........ ..n.....
9390:  8C 0D 26 8B 87 E8 85 8B  C8 B8 1A 00 F7 6E 06 8B   ..&..... .....n..
93A0:  D8 26 03 8F E8 85 89 4E  EC 8B 46 FC C4 5E 0A 26   .&.....N ..F..^.&
93B0:  89 07 8B 46 F6 C4 5E 0E  26 89 07 B8 1A 00 F7 6E   ...F..^. &......n
93C0:  FC 8B D8 8E 06 8C 0D 8B  46 F6 26 89 87 EA 85 B8   ........ F.&.....
93D0:  1A 00 F7 6E FC 8B D8 8B  46 EC 26 89 87 EE 85 B8   ...n.... F.&.....
93E0:  1A 00 F7 6E F6 8B D8 8B  46 FC 26 89 87 EA 85 B8   ...n.... F.&.....
93F0:  1A 00 F7 6E F6 8B D8 8B  46 EC 26 89 87 EE 85 B8   ...n.... F.&.....
9400:  F4 FF 50 FF 76 F6 B8 E0  85 06 50 9A 11 06 55 00   ..P.v... ..P...U.
9410:  83 C4 08 89 46 EE 8B 46  EE 8E 06 8C 0D 8B 5E FE   ....F..F ......^.
9420:  D1 E3 26 89 87 50 84 8B  5E FA D1 E3 26 C7 87 50   ..&..P.. ^...&..P
9430:  84 FF FF B8 1A 00 F7 6E  EE 8B D8 26 F6 87 F8 85   .......n ...&....
```

```
9440:  06 75 03 E9 0B 00 FF 76  FE 9A 52 0D 96 07 83 C4   .u.....v ..R.....
9450:  02 E9 D2 00 FF 76 FA FF  76 FE 9A F6 16 96 07 83   .....v.. v.......
9460:  C4 04 B8 1A 00 F7 6E 08  8B D8 8E 06 8C 0D 26 8B   ......n. ......&.
9470:  87 EE 85 8B C8 B8 1A 00  F7 6E 06 8B D8 26 03 8F   ........ .n...&..
9480:  E8 85 89 4E EC 8B 46 FC  C4 5E 0A 26 89 07 8B 46   ...N..F. .^.&...F
9490:  F0 C4 5E 0E 26 89 07 B8  1A 00 F7 6E F0 8B D8 8E   ..^.&... ...n....
94A0:  06 8C 0D 8B 46 08 26 39  87 E4 85 74 03 E9 06 00   ....F.&9 ...t....
94B0:  B8 00 00 E9 03 00 B8 02  00 89 46 F4 B8 1A 00 F7   ........ ..F.....
94C0:  6E FC 8B D8 8E 06 8C 0D  8B 46 F0 26 89 87 EA 85   n....... .F.&....
94D0:  B8 1A 00 F7 6E FC 8B D8  8B 46 EC 26 89 87 EE 85   ....n... .F.&....
94E0:  B8 1A 00 F7 6E F0 8B D8  8B 46 F4 8B C8 D1 E0 03   ....n... .F......
94F0:  C1 D1 E0 03 D8 8B 46 FC  26 89 87 E4 85 B8 1A 00   ......F. &.......
9500:  F7 6E F0 8B D8 8B 46 F4  8B C8 D1 E0 03 C1 D1 E0   .n....F. ........
9510:  03 D8 8B 46 EC 26 89 87  E8 85 8B 5E FE D1 E3 26   ...F.&.. ...^...&
9520:  C7 87 50 84 FF FF E9 2A  02 83 7E F0 00 7C 03 E9   ..P....* ..~..|..
9530:  D5 00 FF 76 FE FF 76 FA  9A F6 16 96 07 83 C4 04   ...v..v. ........
9540:  B8 1A 00 F7 6E 08 8B D8  8E 06 8C 0D 26 8B 87 E8   ....n... ....&...
9550:  85 8B C8 B8 1A 00 F7 6E  06 8B D8 26 03 8F EE 85   .......n ...&....
9560:  89 4E EC 8B 46 F2 C4 5E  0A 26 89 07 8B 46 F6 C4   .N..F..^ .&...F..
9570:  5E 0E 26 89 07 B8 1A 00  F7 6E F2 8B D8 8E 06 8C   ^.&..... .n......
9580:  0D 8B 46 06 26 39 87 E4  85 74 03 E9 06 00 B8 00   ..F.&9.. .t......
9590:  00 E9 03 00 B8 02 00 89  46 F8 B8 1A 00 F7 6E F6   ........ F.....n.
95A0:  8B D8 8E 06 8C 0D 8B 46  F2 26 89 87 EA 85 B8 1A   .......F .&......
95B0:  00 F7 6E F6 8B D8 8B 46  EC 26 89 87 EE 85 B8 1A   ..n....F .&......
95C0:  00 F7 6E F2 8B D8 8B 46  F8 8B C8 D1 E0 03 C1 D1   ..n....F ........
95D0:  E0 03 D8 8B 46 F6 26 89  87 E4 85 B8 1A 00 F7 6E   ....F.&. .......n
95E0:  F2 8B D8 8B 46 F8 8B C8  D1 E0 03 C1 D1 E0 03 D8   ....F... ........
95F0:  8B 46 EC 26 89 87 E8 85  8B 5E FA D1 E3 26 C7 87   .F.&.... .^...&..
9600:  50 84 FF FF E9 4C 01 FF  76 FE FF 76 FA 9A F6 16   P....L.. v..v....
9610:  96 07 83 C4 04 B8 1A 00  F7 6E 08 8B D8 8E 06 8C   ........ .n......
9620:  0D 26 8B 87 EE 85 8B C8  B8 1A 00 F7 6E 06 8B D8   .&...... ....n...
9630:  26 03 8F EE 85 89 4E EC  8B 46 F2 C4 5E 0A 26 89   &.....N. .F..^.&.
9640:  07 8B 46 F0 C4 5E 0E 26  89 07 B8 1A 00 F7 6E F2   ..F..^.& ......n.
9650:  8B D8 8E 06 8C 0D 8B 46  06 26 39 87 E4 85 74 03   .......F .&9...t.
9660:  E9 06 00 B8 00 00 E9 03  00 B8 02 00 89 46 F8 B8   ........ .....F..
9670:  1A 00 F7 6E F0 8B D8 8E  06 8C 0D 8B 46 08 26 39   ...n.... ....F.&9
9680:  87 E4 85 74 03 E9 06 00  B8 00 00 E9 03 00 B8 02   ...t.... ........
9690:  00 89 46 F4 B8 1A 00 F7  6E F2 8B D8 8B 46 F8 8B   ..F..... n....F..
96A0:  C8 D1 E0 03 C1 D1 E0 03  D8 8E 06 8C 0D 8B 46 F0   ........ ......F.
96B0:  26 89 87 E4 85 B8 1A 00  F7 6E F2 8B D8 8B 46 F8   &....... .n....F.
96C0:  8B C8 D1 E0 03 C1 D1 E0  03 D8 8B 46 EC 26 89 87   ........ ...F.&..
96D0:  E8 85 B8 1A 00 F7 6E F0  8B D8 8B 46 F4 8B C8 D1   ......n. ...F....
96E0:  E0 03 C1 D1 E0 03 D8 8B  46 F2 26 89 87 E4 85 B8   ........ F.&.....
96F0:  1A 00 F7 6E F0 8B D8 8B  46 F4 8B C8 D1 E0 03 C1   ...n.... F.......
9700:  D1 E0 03 D8 8B 46 EC 26  89 87 E8 85 83 7E F4 00   .....F.& .....~..
9710:  74 03 E9 17 00 B8 02 00  50 FF 76 F0 B8 E0 85 06   t....... P.v.....
9720:  50 9A 11 06 55 00 83 C4  08 E9 17 00 B8 16 00 50   P...U... .......P
9730:  FF 76 F0 B8 E0 85 B9 C2  13 51 50 9A 11 06 55 00   .v...... .QP...U.
9740:  83 C4 08 8E 06 8C 0D 8B  5E FA D1 E3 26 C7 87 50   ........ ^...&..P
9750:  84 FF FF B8 1A 00 F7 6E  06 8B D8 8E 06 8C 0D 26   .......n .......&
9760:  C7 87 E0 85 FF FF B8 1A  00 F7 6E 08 8B D8 26 C7   ........ ..n...&.
9770:  87 E0 85 FF FF 26 83 2E  2C 84 02 26 FF 06 4E 84   .....&.. ,..&..N.
9780:  5E 5F 8B E5 5D CB 55 8B  EC 81 EC 24 00 57 56 B8   ^_..].U. ...$.WV.
9790:  1A 00 F7 6E 06 8B D8 8E  06 8C 0D 26 8B 87 F6 85   ...n.... ...&....
```

```
97A0:  89 46 F6 B8 1A 00 F7 6E  08 8B D8 26 8B 87 F6 85   .F.....n ...&....
97B0:  89 46 F2 B8 1A 00 F7 6E  0A 8B D8 26 8B 87 F6 85   .F.....n ...&....
97C0:  89 46 F0 FF 76 F6 FF 76  F2 9A F6 16 96 07 83 C4   .F..v..v ........
97D0:  04 FF 76 F6 FF 76 F0 9A  F6 16 96 07 83 C4 04 B8   ..v..v.. ........
97E0:  1A 00 F7 6E 06 8B D8 8E  06 8C 0D 26 83 BF EA 85   ...n.... ...&....
97F0:  00 7C 03 E9 32 00 B8 FF  FF 50 B8 1A 00 F7 6E 06   .|..2... .P....n.
9800:  8B D8 26 FF B7 E4 85 B8  E0 85 06 50 9A EC 03 55   ..&..... ...P...U
9810:  00 83 C4 08 89 46 DE 8B  46 DE 8E 06 8C 0D 8B 5E   .....F.. F......^
9820:  F6 D1 E3 26 89 87 50 84  B8 1A 00 F7 6E 08 8B D8   ...&..P. ....n...
9830:  8E 06 8C 0D 26 83 BF EA  85 00 7D 03 E9 14 00 B8   ....&... ..}.....
9840:  16 00 50 FF 76 08 B8 E0  85 06 50 9A 11 06 55 00   ..P.v... ..P...U.
9850:  83 C4 08 B8 1A 00 F7 6E  0A 8B D8 8E 06 8C 0D 26   .......n .......&
9860:  83 BF EA 85 00 7D 03 E9  14 00 B8 16 00 50 FF 76   .....}.. .....P.v
9870:  0A B8 E0 85 06 50 9A 11  06 55 00 83 C4 08 B8 1A   .....P.. .U......
9880:  00 F7 6E 06 8B D8 8E 06  8C 0D 26 8B 87 EC 85 89   ..n..... ..&.....
9890:  46 FE B8 1A 00 F7 6E 08  8B D8 26 8B 87 E6 85 89   F.....n. ..&.....
98A0:  46 FC B8 1A 00 F7 6E 0A  8B D8 26 8B 87 E6 85 89   F.....n. ..&.....
98B0:  46 FA C7 46 EE 00 00 8B  46 FC 2B 46 FA 50 9A 04   F..F.... F.+F.P..
98C0:  2F AB 10 83 C4 02 B9 68  01 99 F7 F9 8B 46 FC 2B   /......h .....F.+
98D0:  46 FA 50 8B F2 9A 04 2F  AB 10 83 C4 02 B9 68 01   F.P..../ ......h.
98E0:  99 F7 F9 81 EA 68 01 F7  DA 3B D6 7E 03 E9 1F 00   .....h.. .;.~....
98F0:  8B 46 FC 2B 46 FA 50 9A  04 2F AB 10 83 C4 02 B9   .F.+F.P. ./......
9900:  68 01 99 F7 F9 8B C2 2D  68 01 F7 D8 E9 17 00 8B   h......- h.......
9910:  46 FC 2B 46 FA 50 9A 04  2F AB 10 83 C4 02 B9 68   F.+F.P.. /......h
9920:  01 99 F7 F9 8B C2 3D 14  00 7F 03 E9 44 00 8B 46   ......=. ....D..F
9930:  FE 2B 46 FC 89 46 EC 83  7E EC 00 7C 03 E9 05 00   .+F..F.. ~..|....
9940:  81 46 EC 68 01 8B 46 FC  2B 46 FA 89 46 EA 83 7E   .F.h..F. +F..F..~
9950:  EA 00 7C 03 E9 05 00 81  46 EA 68 01 8B 46 EA 03   ..|..... F.h..F..
9960:  46 EC 3D 68 01 7D 03 E9  05 00 C7 46 EE 01 00 E9   F.=h.}.. ...F....
9970:  BB 00 FF 76 FE 9A 9F 00  24 00 83 C4 02 8B C8 B8   ...v.... $.......
9980:  1A 00 FF 76 FE 8B F1 9A  06 00 24 00 83 C4 02 8B   ...v.... ..$.....
9990:  C8 B8 1A 00 F7 6E 08 8B  D8 8E 06 8C 0D 26 8B 87   .....n.. .....&..
99A0:  E2 85 F7 EE 99 8B D8 B8  1A 00 8B F2 F7 6E 08 8B   ........ .....n..
99B0:  F8 26 8B 85 E0 85 F7 E9  03 D8 13 F2 89 5E E6 89   .&...... .....^..
99C0:  76 E8 FF 76 FE 9A 9F 00  24 00 83 C4 02 FF 76 FE   v..v.... $.....v.
99D0:  8B F0 9A 06 00 24 00 83  C4 02 8B C8 B8 1A 00 F7   .....$.. ........
99E0:  6E 0A 8B D8 8E 06 8C 0D  26 8B 87 E2 85 F7 EE 99   n....... &.......
99F0:  8B D8 B8 1A 00 8B F2 F7  6E 0A 8B F8 26 8B 85 E0   ........ n...&...
9A00:  85 F7 E9 03 D8 13 F2 89  5E E2 89 76 E4 8B 46 E6   ........ ^..v..F.
9A10:  8B 56 E8 39 56 E4 7D 03  E9 12 00 7E 03 E9 08 00   .V.9V.}. ...~....
9A20:  39 46 E2 77 03 E9 05 00  C7 46 EE 01 00 83 7E EE   9F.w.... .F....~.
9A30:  00 75 03 E9 12 00 8B 46  08 89 46 E0 8B 46 0A 89   .u.....F ..F..F..
9A40:  46 08 8B 46 E0 89 46 0A  B8 1A 00 F7 6E 06 8B D8   F..F..F. ....n...
9A50:  8E 06 8C 0D 26 83 8F F8  85 08 B8 1A 00 F7 6E 06   ....&... ......n.
9A60:  8B D8 B8 1A 00 F7 6E 08  05 E4 85 06 1E 8D BF E4   ......n. ........
9A70:  85 8B F0 06 1F A5 A5 A5  1F 07 B8 1A 00 F7 6E 06   ........ ......n.
9A80:  8B D8 B8 1A 00 F7 6E 0A  05 E4 85 06 1E 8D BF F0   ......n. ........
9A90:  85 8B F0 06 1F A5 A5 A5  1F 07 B8 1A 00 F7 6E 08   ........ ......n.
9AA0:  8B D8 26 8B 87 E4 85 89  46 F8 B8 1A 00 F7 6E 0A   ..&..... F.....n.
9AB0:  8B D8 26 8B 87 E4 85 89  46 F4 B8 1A 00 F7 6E F8   ..&..... F.....n.
9AC0:  8B D8 8B 46 06 26 89 87  EA 85 B8 1A 00 F7 6E F4   ...F.&.. ......n.
9AD0:  8B D8 8B 46 06 26 89 87  EA 85 8B 5E F2 D1 E3 26   ...F.&.. ...^...&
9AE0:  C7 87 50 84 FF FF 8B 5E  F0 D1 E3 26 C7 87 50 84   ..P....^ ...&..P.
9AF0:  FF FF B8 1A 00 F7 6E 08  8B D8 26 C7 87 E0 85 FF   ......n. ..&.....
```

```
9B00:  FF B8 1A 00 F7 6E 0A 8B  D8 26 C7 87 E0 85 FF FF   .....n.. .&......
9B10:  26 83 2E 2C 84 02 26 FF  06 4E 84 5E 5F 8B E5 5D   &..,..&. .N.^_..]
9B20:  CB 55 8B EC 81 EC 74 00  57 56 83 3E A4 06 00 7E   .U....t. WV.>...~
9B30:  03 E9 03 00 E9 48 01 B8  00 00 50 9A 1A 0B 55 00   .....H.. ..P...U.
9B40:  83 C4 02 8E 06 8C 0D 26  A1 2C 84 A3 9E 4D C7 46   .......& .,...M.F
9B50:  90 00 00 E9 03 00 FF 46  90 A1 9E 4D 39 46 90 7C   .......F ...M9F.|
9B60:  03 E9 1B 01 8E 06 8C 0D  8B 5E 90 8B C3 D1 E3 03   ........ .^......
9B70:  D8 D1 E3 26 8B 87 24 D7  89 46 8C B8 1A 00 F7 6E   ...&..$. .F.....n
9B80:  8C 8B D8 26 83 BF E0 85  00 7D 03 E9 EE 00 B8 1A   ...&.... .}......
9B90:  00 F7 6E 8C 8B D8 26 F6  87 F8 85 06 74 03 E9 DB   ..n...&. ....t...
9BA0:  00 B8 1A 00 F7 6E 8C 8B  D8 26 83 BF F0 85 00 7C   .....n.. .&.....|
9BB0:  03 E9 C8 00 8D 46 92 16  50 FF 76 8C 9A 2B 24 96   .....F.. P.v..+$.
9BC0:  07 83 C4 06 3D 02 00 7C  03 E9 03 00 E9 87 FF 8B   ....=..| ........
9BD0:  46 92 89 46 FE 8B 46 94  89 46 FC FF 36 A4 06 FF   F..F..F. .F..6...
9BE0:  76 FE 9A B4 25 96 07 83  C4 04 3B 46 8C 74 03 E9   v...%... ..;F.t..
9BF0:  8A 00 FF 36 A4 06 FF 76  FC 9A B4 25 96 07 83 C4   ...6...v ...%....
9C00:  04 3B 46 8C 74 03 E9 73  00 B8 1A 00 F7 6E 8C 8B   .;F.t..s .....n..
9C10:  D8 8E 06 8C 0D 26 8B 87  F6 85 89 46 FA B8 1A 00   .....&.. ...F....
9C20:  F7 6E FE 8B D8 26 8B 87  F6 85 89 46 F8 B8 1A 00   .n...&.. ...F....
9C30:  F7 6E FC 8B D8 26 8B 87  F6 85 89 46 F6 8B 46 FA   .n...&.. ...F..F.
9C40:  39 46 F8 75 03 E9 34 00  8B 46 FA 39 46 F6 75 03   9F.u..4. .F.9F.u.
9C50:  E9 29 00 8B 46 F8 39 46  F6 75 03 E9 1E 00 FF 76   .)..F.9F .u.....v
9C60:  FC FF 76 FE FF 76 8C 9A  26 1C 96 07 83 C4 06 B8   ..v..v.. &.......
9C70:  B4 06 1E 50 9A 82 3B BC  0B 83 C4 04 E9 D7 FE 5E   ...P..;. .......^
9C80:  5F 8B E5 5D CB 55 8B EC  81 EC 00 00 57 56 83 3E   _..].U.. ....WV.>
9C90:  9C 06 00 75 03 E9 08 00  9A AF 2E 96 07 E9 05 00   ...u.... ........
9CA0:  9A 66 22 96 07 5E 5F 8B  E5 5D CB 55 8B EC 81 EC   .f"..^_. .].U....
9CB0:  02 00 57 56 B8 1A 00 F7  6E 06 8B D8 8E 06 8C 0D   ..WV.... n.......
9CC0:  26 83 BF E4 85 00 7D 03  E9 08 00 C7 46 FE 00 00   &.....}. ....F...
9CD0:  E9 05 00 C7 46 FE 01 00  8B 46 FE C4 5E 08 26 89   ....F... .F..^.&.
9CE0:  07 B8 1A 00 F7 6E 06 8B  5E FE 8B CB D1 E3 03 D9   .....n.. ^.......
9CF0:  D1 E3 03 D8 8E 06 8C 0D  26 8B 87 E4 85 C4 5E 0C   ........ &.....^.
9D00:  26 89 07 B8 1A 00 F7 6E  06 8B 5E FE 8B CB D1 E3   &......n ..^.....
9D10:  03 D9 D1 E3 03 D8 8E 06  8C 0D 26 8B 87 E8 85 C4   ........ ..&.....
9D20:  5E 14 26 89 07 B8 1A 00  F7 6E 06 8B 5E FE 8B CB   ^.&..... .n..^...
9D30:  D1 E3 03 D9 D1 E3 03 D8  8E 06 8C 0D 26 8B 87 E6   ........ ....&...
9D40:  85 C4 5E 10 26 89 07 5E  5F 8B E5 5D CB 55 8B EC   ..^.&..^ _..].U..
9D50:  81 EC 00 00 57 56 B8 1A  00 F7 6E 06 8B D8 8E 06   ....WV.. ..n.....
9D60:  8C 0D 26 8B 87 F8 85 25  FB FF 0D 02 00 8B C8 B8   ..&....% ........
9D70:  1A 00 F7 6E 06 8B D8 26  89 8F F8 85 B8 1A 00 F7   ...n...& ........
9D80:  6E 08 8B D8 26 8B 87 F8  85 25 FB FF 0D 02 00 8B   n...&... .%......
9D90:  C8 B8 1A 00 F7 6E 08 8B  D8 26 89 8F F8 85 8B 46   .....n.. .&.....F
9DA0:  06 8B 1E 98 4D D1 E3 D1  E3 89 87 52 4C 8B 46 08   ....M... ...RL.F.
9DB0:  8B 1E 98 4D D1 E3 D1 E3  89 87 54 4C FF 06 98 4D   ...M.... ..TL...M
9DC0:  5E 5F 8B E5 5D CB 55 8B  EC 81 EC 18 00 57 56 B8   ^_..].U. .....WV.
9DD0:  00 00 50 9A 1A 0B 55 00  83 C4 02 8E 06 8C 0D 26   ..P...U. .......&
9DE0:  A1 2C 84 A3 9E 4D C7 46  EE 00 00 E9 03 00 FF 46   .,...M.F .......F
9DF0:  EE A1 9E 4D 39 46 EE 7C  03 E9 89 01 8E 06 8C 0D   ...M9F.| ........
9E00:  8B 5E EE 8B C3 D1 E3 03  D8 D1 E3 26 8B 87 24 D7   .^...... ...&..$.
9E10:  89 46 E8 B8 1A 00 F7 6E  E8 8B D8 26 83 BF E0 85   .F.....n ...&....
9E20:  00 7D 03 E9 5C 01 B8 1A  00 F7 6E E8 8B D8 26 F6   .}..\... ..n...&.
9E30:  87 F8 85 06 74 03 E9 49  01 B8 1A 00 F7 6E E8 8B   ....t..I .....n..
9E40:  D8 26 83 BF F0 85 00 7C  03 E9 36 01 FF 36 A2 06   .&.....| ..6..6..
9E50:  FF 76 E8 9A B4 25 96 07  83 C4 04 89 46 FA 3D 00   .v...%.. ....F.=.
```

```
9E60:  00 7C 03 E9 03 00 E9 85  FF FF 36 A2 06 FF 76 FA   .|...... ..6...v.
9E70:  9A B4 25 96 07 83 C4 04  3B 46 E8 74 03 E9 02 01   ..%..... ;F.t....
9E80:  B8 1A 00 F7 6E E8 8B D8  8E 06 8C 0D 26 8B 87 F6   ....n... ....&...
9E90:  85 8B C8 B8 1A 00 F7 6E  FA 8B D8 26 39 8F F6 85   .......n ...&9...
9EA0:  74 03 E9 11 00 FF 76 FA  FF 76 E8 9A ED 21 96 07   t.....v. .v...!..
9EB0:  83 C4 04 E9 CC 00 83 3E  9E 06 00 75 03 E9 80 00   .......> ...u....
9EC0:  8D 46 FE 16 50 8D 46 FC  16 50 8D 46 F0 16 50 16   .F..P.F. .P.F..P.
9ED0:  50 FF 76 E8 9A 4B 21 96  07 83 C4 12 8D 46 F8 16   P.v..K!. .....F..
9EE0:  50 8D 46 F6 16 50 8D 46  F0 16 50 16 50 FF 76 FA   P.F..P.F ..P.P.v.
9EF0:  9A 4B 21 96 07 83 C4 12  B8 1A 00 F7 6E E8 8B D8   .K!..... ....n...
9F00:  8E 06 8C 0D B8 1A 00 F7  6E FA 8B F0 26 8B 84 E0   ........ n...&...
9F10:  85 26 03 87 E0 85 99 2B  C2 D1 F8 89 46 F2 B8 1A   .&.....+ ....F...
9F20:  00 F7 6E E8 8B D8 B8 1A  00 F7 6E FA 8B F0 26 8B   ..n..... ..n...&.
9F30:  84 E2 85 26 03 87 E2 85  99 2B C2 D1 F8 89 46 F4   ...&.... .+....F.
9F40:  8D 46 EA 16 50 8D 4E EC  16 51 FF 76 FA FF 76 E8   .F..P.N. .Q.v..v.
9F50:  9A 99 17 96 07 83 C4 0C  83 3E 9E 06 00 75 03 E9   ........ .>...u..
9F60:  20 00 FF 76 F8 FF 76 F6  FF 76 EA FF 76 FE FF 76    ..v..v. .v..v..v
9F70:  FC FF 76 EC FF 76 F4 FF  76 F2 9A DB 05 96 07 83   ..v..v.. v.......
9F80:  C4 10 E9 69 FE 5E 5F 8B  E5 5D CB 55 8B EC 81 EC   ...i.^_. .].U....
9F90:  0C 00 57 56 B8 1A 00 F7  6E 06 8B D8 8E 06 8C 0D   ..WV.... n.......
9FA0:  26 8B 87 E0 85 89 46 FC  B8 1A 00 F7 6E 06 8B D8   &.....F. ....n...
9FB0:  26 8B 87 E2 85 89 46 FE  FF 76 0A FF 76 08 B8 14   &.....F. .v..v...
9FC0:  00 50 50 FF 76 FE FF 76  FC 9A 7F 0C 96 07 83 C4   .PP.v..v ........
9FD0:  0C 89 46 F8 B8 00 00 89  46 F6 89 46 F4 E9 03 00   ..F..... F..F....
9FE0:  FF 46 F6 8B 46 F8 39 46  F6 7C 03 E9 81 00 8B 5E   .F..F.9F .|.....^
9FF0:  F6 D1 E3 C4 76 08 26 8B  00 89 46 FA 8B 46 06 39   ....v.&. ..F..F.9
A000:  46 FA 75 03 E9 65 00 B8  1A 00 F7 6E FA 8B D8 8E   F.u..e.. ...n....
A010:  06 8C 0D 26 F6 87 F8 85  06 74 03 E9 4E 00 B8 1A   ...&.... .t..N...
A020:  00 F7 6E FA 8B D8 26 83  BF F0 85 00 7C 03 E9 3B   ..n...&. ....|..;
A030:  00 B8 1A 00 F7 6E FA 8B  D8 8B 46 06 26 39 87 EA   .....n.. ..F.&9..
A040:  85 75 03 E9 26 00 B8 1A  00 F7 6E 06 8B D8 8B 46   .u..&... ..n....F
A050:  FA 26 39 87 EA 85 75 03  E9 11 00 8B 5E F4 D1 E3   .&9...u. ....^...
A060:  C4 76 08 8B 46 FA 26 89  00 FF 46 F4 E9 71 FF 8B   .v..F.&. ..F..q..
A070:  46 F4 89 46 F8 8B 46 F8  89 46 F6 E9 03 00 FF 4E   F..F..F. .F.....N
A080:  F6 83 7E F6 01 7F 03 E9  7E 00 C7 46 F4 01 00 E9   ..~..... ~..F....
A090:  03 00 FF 46 F4 8B 46 F6  39 46 F4 7C 03 E9 65 00   ...F..F. 9F.|..e.
A0A0:  8B 5E F4 D1 E3 C4 76 08  26 8B 00 89 46 FA 8B 76   .^....v. &...F..v
A0B0:  F4 D1 E6 C4 5E 08 26 FF  70 FE FF 76 06 9A E3 26   ....^.&. p..v...&
A0C0:  96 07 83 C4 04 FF 76 FA  FF 76 06 8B F0 9A E3 26   ......v. .v.....&
A0D0:  96 07 83 C4 04 3B C6 7F  03 E9 26 00 8B 76 F4 D1   .....;.. ..&..v..
A0E0:  E6 C4 5E 08 26 8B 40 FE  8B 5E F4 D1 E3 C4 76 08   ..^.&.@. .^....v.
A0F0:  26 89 00 8B 46 FA 8B 76  F4 D1 E6 C4 5E 08 26 89   &...F..v ....^.&.
A100:  40 FE E9 8D FF E9 76 FF  8B 46 F8 E9 00 00 5E 5F   @.....v. .F....^_
A110:  8B E5 5D CB 55 8B EC 81  EC 74 00 57 56 B8 1A 00   ..].U... .t.WV...
A120:  F7 6E 06 8B D8 8E 06 8C  0D 26 8B 87 E0 85 89 46   .n...... .&.....F
A130:  FC B8 1A 00 F7 6E 06 8B  D8 26 8B 87 E2 85 89 46   .....n.. .&.....F
A140:  FE 8D 46 8E 16 50 B8 14  00 50 50 FF 76 FE FF 76   ..F..P.. .PP.v..v
A150:  FC 9A 7F 0C 96 07 83 C4  0C 89 46 F6 C7 46 F8 FF   ........ ..F..F..
A160:  FF C7 46 F4 F1 D8 C7 46  F2 00 00 E9 03 00 FF 46   ..F....F .......F
A170:  F2 8B 46 F6 39 46 F2 7C  03 E9 95 00 8B 76 F2 D1   ..F.9F.| .....v..
A180:  E6 8B 42 8E 89 46 FA 8B  46 06 39 46 FA 75 03 E9   ..B..F.. F.9F.u..
A190:  7C 00 B8 1A 00 F7 6E FA  8B D8 8E 06 8C 0D 26 F6   |.....n. ......&.
A1A0:  87 F8 85 06 74 03 E9 65  00 B8 1A 00 F7 6E FA 8B   ....t..e .....n..
A1B0:  D8 26 83 BF F0 85 00 7C  03 E9 52 00 B8 1A 00 F7   .&.....| ..R.....
```

EXTRACT.DMP Thursday, January 6, 1994 12:02pm Page 49


```
A1C0:  6E FA 8B D8 8B 46 06 26  39 87 EA 85 75 03 E9 3D   n....F.& 9...u..=
A1D0:  00 B8 1A 00 F7 6E 06 8B  D8 8B 46 FA 26 39 87 EA   .....n.. ..F.&9..
A1E0:  85 75 03 E9 28 00 FF 76  FA FF 76 06 9A E3 26 96   .u..(..v ..v...&.
A1F0:  07 83 C4 04 89 46 8C 8B  46 8C 39 46 F4 7C 03 E9   .....F.. F.9F.|..
A200:  0C 00 8B 46 FA 89 46 F8  8B 46 8C 89 46 F4 E9 5D   ...F..F. .F..F..]
A210:  FF 83 7E F8 00 7D 03 E9  1D 00 B8 87 FF F7 6E 08   ..~..}.. ......n.
A220:  B9 64 00 99 F7 F9 3B 46  F4 7C 03 E9 09 00 8B 46   .d....;F .|.....F
A230:  F8 E9 09 00 E9 06 00 B8  FF FF E9 00 00 5E 5F 8B   ........ .....^_.
A240:  E5 5D CB 55 8B EC 81 EC  20 00 57 56 C7 46 E8 00   .].U....  .WV.F..
A250:  00 B8 1A 00 F7 6E 06 05  E4 85 89 46 EA C7 46 EC   .....n.. ...F..F.
A260:  C2 13 B8 1A 00 F7 6E 08  05 E4 85 89 46 E4 C7 46   ......n. ....F..F
A270:  E6 C2 13 C4 5E EA 26 83  3F 00 7F 03 E9 0D 00 C4   ....^.&. ?.......
A280:  5E EA 26 8B 47 02 89 46  FE E9 0A 00 C4 5E EA 26   ^.&.G..F .....^.&
A290:  8B 47 08 89 46 FE C4 5E  E4 26 83 3F 00 7F 03 E9   .G..F..^ .&.?....
A2A0:  0D 00 C4 5E E4 26 8B 47  02 89 46 FC E9 0A 00 C4   ...^.&.G ..F.....
A2B0:  5E E4 26 8B 47 08 89 46  FC 83 7E FE 00 7D 03 E9   ^.&.G..F ..~..}..
A2C0:  09 00 83 7E FC 00 7C 03  E9 41 00 C7 46 E8 28 00   ...~..|. .A..F.(.
A2D0:  83 7E FC 00 7D 03 E9 12  00 8B 46 FC 05 B4 00 B9   .~..}... ..F.....
A2E0:  68 01 99 F7 F9 89 56 FE  E9 21 00 83 7E FE 00 7D   h.....V. .!..~..}
A2F0:  03 E9 12 00 8B 46 FE 05  B4 00 B9 68 01 99 F7 F9   .....F.. ...h....
A300:  89 56 FC E9 06 00 B8 F1  D8 E9 D9 01 B8 1A 00 F7   .V...... ........
A310:  6E 06 8B D8 8E 06 8C 0D  26 8B 87 E0 85 89 46 F4   n....... &.....F.
A320:  B8 1A 00 F7 6E 06 8B D8  26 8B 87 E2 85 89 46 F0   ....n... &.....F.
A330:  B8 1A 00 F7 6E 08 8B D8  26 8B 87 E0 85 89 46 F2   ....n... &.....F.
A340:  B8 1A 00 F7 6E 08 8B D8  26 8B 87 E2 85 89 46 EE   ....n... &.....F.
A350:  8B 46 F2 2B 46 F4 50 8B  46 EE 2B 46 F0 50 9A CE   .F.+F.P. F.+F.P..
A360:  01 24 00 83 C4 04 89 46  F8 8B 46 F4 2B 46 F2 99   .$.....F ..F.+F..
A370:  52 50 52 50 9A 74 30 AB  10 8B C8 8B 46 F0 2B 46   RPRP.t0. ....F.+F
A380:  EE 8B DA 99 52 50 52 50  8B F1 8B FB 9A 74 30 AB   ....RPRP .....t0.
A390:  10 03 F0 13 FA 57 56 9A  38 01 24 00 83 C4 04 89   .....WV. 8.$.....
A3A0:  46 FA 8B 46 FE 2B 46 FC  05 B4 00 50 9A 04 2F AB   F..F.+F. ...P../.
A3B0:  10 83 C4 02 B9 68 01 99  F7 F9 8B 46 FE 2B 46 FC   .....h.. ...F.+F.
A3C0:  05 B4 00 50 8B F2 9A 04  2F AB 10 83 C4 02 B9 68   ...P.... /......h
A3D0:  01 99 F7 F9 81 EA 68 01  F7 DA 3B D6 7E 03 E9 22   ......h. ..;.~.."
A3E0:  00 8B 46 FE 2B 46 FC 05  B4 00 50 9A 04 2F AB 10   ..F.+F.. ..P../..
A3F0:  83 C4 02 B9 68 01 99 F7  F9 8B C2 2D 68 01 F7 D8   ....h... ...-h...
A400:  E9 1A 00 8B 46 FE 2B 46  FC 05 B4 00 50 9A 04 2F   ....F.+F ....P../
A410:  AB 10 83 C4 02 B9 68 01  99 F7 F9 8B C2 89 46 F6   ......h. ......F.
A420:  B8 4C FF 2B 46 FC 2B 46  FE 99 2B C2 D1 F8 03 46   .L.+F.+F ..+....F
A430:  F8 50 9A 04 2F AB 10 83  C4 02 B9 B4 00 99 F7 F9   .P../... ........
A440:  B8 4C FF 2B 46 FC 2B 46  FE 8B CA 99 2B C2 D1 F8   .L.+F.+F ....+...
A450:  03 46 F8 50 8B F1 9A 04  2F AB 10 83 C4 02 B9 B4   .F.P.... /.......
A460:  00 99 F7 F9 81 EA B4 00  F7 DA 3B D6 7E 03 E9 2A   ........ ..;.~..*
A470:  00 B8 4C FF 2B 46 FC 2B  46 FE 99 2B C2 D1 F8 03   ..L.+F.+ F..+....
A480:  46 F8 50 9A 04 2F AB 10  83 C4 02 B9 B4 00 99 F7   F.P../.. ........
A490:  F9 8B C2 2D B4 00 F7 D8  E9 22 00 B8 4C FF 2B 46   ...-.... .."..L.+F
A4A0:  FC 2B 46 FE 99 2B C2 D1  F8 03 46 F8 50 9A 04 2F   .+F..+.. ..F.P../
A4B0:  AB 10 83 C4 02 B9 B4 00  99 F7 F9 8B C2 F7 6E FA   ........ ......n.
A4C0:  89 46 E2 8B 46 E2 B9 FA  FF 99 F7 F9 8B 4E FA 8B   .F..F... .....N..
A4D0:  D1 D1 E1 03 CA D1 E1 2B  C1 2B 46 F6 01 46 E8 8B   .......+ .+F..F..
A4E0:  46 E8 E9 00 00 5E 5F 8B  E5 5D CB 55 8B EC 81 EC   F....^_. .].U....
A4F0:  2A 00 57 56 B8 00 00 50  9A 1A 0B 55 00 83 C4 02   *.WV...P ...U....
A500:  8E 06 8C 0D 26 A1 2C 84  A3 9E 4D C7 46 EC 00 00   ....&.,. ..M.F...
A510:  E9 03 00 FF 46 EC A1 9E  4D 39 46 EC 7C 03 E9 E8   ....F... M9F.|...
```

EXTRACT.DMP          Thursday, January 6, 1994 12:02pm          Page 50

```
A520:  04 8E 06 8C 0D 8B 5E EC  8B C3 D1 E3 03 D8 D1 E3  ......^. ........
A530:  26 8B 87 24 D7 89 46 D8  B8 1A 00 F7 6E D8 8B D8  &..$..F. ....n...
A540:  26 83 BF E0 85 00 7D 03  E9 BB 04 B8 1A 00 F7 6E  &.....}. .......n
A550:  D8 8B D8 26 F6 87 F8 85  06 74 03 E9 A8 04 B8 1A  ...&.... .t......
A560:  00 F7 6E D8 8B D8 26 83  BF F0 85 00 7C 03 E9 95  ..n...&. ....|...
A570:  04 8B 46 EC 89 46 E2 E9  03 00 FF 4E E2 83 7E E2  ..F..F.. ...N..~.
A580:  00 7F 03 E9 35 00 8E 06  8C 0D 8B 5E EC 8B C3 D1  ....5... ...^....
A590:  E3 03 D8 D1 E3 26 8B 87  20 D7 8B 5E E2 8B CB D1  .....&..  ..^....
A5A0:  E3 03 D9 D1 E3 26 2B 87  20 D7 3D 0A 00 7F 03 E9  .....&+.  .=.....
A5B0:  06 00 FF 46 E2 E9 03 00  E9 BF FF B8 0A 00 89 46  ...F.... .......F
A5C0:  E6 89 46 E4 B8 1A 00 F7  6E D8 8B D8 8E 06 8C 0D  ..F..... n.......
A5D0:  26 8B 87 E0 85 89 46 FC  B8 1A 00 F7 6E D8 8B D8  &.....F. ....n...
A5E0:  26 8B 87 E2 85 89 46 FE  C7 46 F8 FF FF 8B 46 E2  &.....F. .F....F.
A5F0:  89 46 E0 E9 03 00 FF 46  E0 A1 9E 4D 39 46 E0 7C  .F.....F ...M9F.|
A600:  03 E9 FA 00 8B 46 E0 39  46 EC 74 03 E9 03 00 E9  .....F.9 F.t.....
A610:  E4 FF 8E 06 8C 0D 8B 5E  E0 8B C3 D1 E3 03 D8 D1  .......^ ........
A620:  E3 26 8B 87 20 D7 8B 5E  EC 8B CB D1 E3 03 D9 D1  .&.. ..^ ........
A630:  E3 26 2B 87 20 D7 3D 0A  00 7F 03 E9 03 00 E9 BD  .&+. .=. ........
A640:  00 8E 06 8C 0D 8B 5E E0  8B C3 D1 E3 03 D8 D1 E3  ......^. ........
A650:  26 8B 87 24 D7 89 46 DA  B8 1A 00 F7 6E DA 8B D8  &..$..F. ....n...
A660:  26 83 BF E0 85 00 7D 03  E9 90 00 B8 1A 00 F7 6E  &.....}. .......n
A670:  DA 8B D8 26 F6 87 F8 85  06 74 03 E9 7D 00 B8 1A  ...&.... .t..}...
A680:  00 F7 6E DA 8B D8 26 83  BF F0 85 00 7C 03 E9 6A  ..n...&. ....|..j
A690:  00 B8 1A 00 F7 6E DA 8B  D8 26 8B 87 E0 85 2B 46  .....n.. .&....+F
A6A0:  FC 50 9A 04 2F AB 10 83  C4 02 89 46 EE B8 1A 00  .P../... ...F....
A6B0:  F7 6E DA 8B D8 8E 06 8C  0D 26 8B 87 E2 85 2B 46  .n...... .&....+F
A6C0:  FE 50 9A 04 2F AB 10 83  C4 02 89 46 F0 8B 46 E4  .P../... ...F..F.
A6D0:  39 46 EE 7C 03 E9 23 00  8B 46 E6 39 46 F0 7C 03  9F.|..#. .F.9F.|.
A6E0:  E9 18 00 8B 46 EE 8B 56  F0 89 46 E4 89 56 E6 8B  ....F..V ..F..V..
A6F0:  46 DA 89 46 F8 8B 46 E0  89 46 E8 E9 F8 FE 83 7E  F..F..F. .F.....~
A700:  F8 FF 74 03 E9 03 00 E9  09 FE C7 46 EA 00 00 B8  ..t..... ...F....
A710:  1A 00 F7 6E D8 8B D8 8E  06 8C 0D 26 83 BF EA 85  ...n.... ...&....
A720:  00 7C 03 E9 34 00 B8 1A  00 F7 6E D8 8B D8 8B 46  .|..4... ..n....F
A730:  F8 26 39 87 E4 85 74 03  E9 03 00 E9 D5 FD B8 1A  .&9...t. ........
A740:  00 F7 6E D8 8B D8 8E 06  8C 0D 26 8B 87 E6 85 89  ..n..... ..&.....
A750:  46 FA C7 46 EA 01 00 E9  14 00 B8 1A 00 F7 6E D8  F..F.... ......n.
A760:  8B D8 8E 06 8C 0D 26 8B  87 EC 85 89 46 FA 83 7E  ......&. ....F..~
A770:  FA 00 7C 03 E9 03 00 E9  99 FD 81 7E FA B4 00 7C  ..|..... ...~...|
A780:  03 E9 08 00 81 46 FA B4  00 E9 05 00 81 6E FA B4  .....F.. .....n..
A790:  00 B8 1A 00 F7 6E F8 8B  D8 8E 06 8C 0D 26 83 BF  .....n.. .....&..
A7A0:  EA 85 00 7C 03 E9 34 00  B8 1A 00 F7 6E F8 8B D8  ...|..4. ....n...
A7B0:  8B 46 D8 26 39 87 E4 85  74 03 E9 03 00 E9 53 FD  .F.&9... t.....S.
A7C0:  B8 1A 00 F7 6E F8 8B D8  8E 06 8C 0D 26 8B 87 E6  ....n... ....&...
A7D0:  85 89 46 F6 C7 46 EA 01  00 E9 14 00 B8 1A 00 F7  ..F..F.. ........
A7E0:  6E F8 8B D8 8E 06 8C 0D  26 8B 87 EC 85 89 46 F6  n....... &.....F.
A7F0:  83 7E F6 00 7C 03 E9 03  00 E9 17 FD 8B 46 FA 2B  .~..|... .....F.+
A800:  46 F6 50 9A 04 2F AB 10  83 C4 02 89 46 F2 81 7E  F.P../.. ....F..~
A810:  F2 B4 00 7F 03 E9 09 00  B8 68 01 2B 46 F2 89 46  ........ .h.+F..F
A820:  F2 83 7E F2 2D 7F 03 E9  03 00 E9 E6 FC 83 7E E4  ..~.-... ......~.
A830:  05 7E 03 E9 09 00 83 7E  E6 05 7F 03 E9 ED 00 B8  .~.....~ ........
A840:  1A 00 F7 6E F8 8B D8 8E  06 8C 0D 26 8B 87 E0 85  ...n.... ...&....
A850:  8B C8 B8 1A 00 F7 6E D8  8B D8 26 2B 8F E0 85 51  ......n. ..&+...Q
A860:  B8 1A 00 F7 6E F8 8B D8  26 8B 87 E2 85 8B C8 B8  ....n... &.......
A870:  1A 00 F7 6E D8 8B D8 26  2B 8F E2 85 51 9A CE 01  ...n...& +...Q...
```

```
A880:  24 00 83 C4 04 89 46 F4  8B 46 F6 03 46 FA 99 2B   $.....F. .F..F..+
A890:  C2 D1 F8 2B 46 F4 F7 D8  50 9A 04 2F AB 10 83 C4   ...+F... P../....
A8A0:  02 B9 B4 00 99 F7 F9 8B  46 F6 03 46 FA 8B CA 99   ........ F..F....
A8B0:  2B C2 D1 F8 2B 46 F4 F7  D8 50 8B F1 9A 04 2F AB   +...+F.. .P..../.
A8C0:  10 83 C4 02 B9 B4 00 99  F7 F9 81 EA B4 00 F7 DA   ........ ........
A8D0:  3B D6 7E 03 E9 29 00 8B  46 F6 03 46 FA 99 2B C2   ;.~..).. F..F..+.
A8E0:  D1 F8 2B 46 F4 F7 D8 50  9A 04 2F AB 10 83 C4 02   ..+F...P ../.....
A8F0:  B9 B4 00 99 F7 F9 8B C2  2D B4 00 F7 D8 E9 21 00   ........ -.....!.
A900:  8B 46 F6 03 46 FA 99 2B  C2 D1 F8 2B 46 F4 F7 D8   .F..F..+ ...+F...
A910:  50 9A 04 2F AB 10 83 C4  02 B9 B4 00 99 F7 F9 8B   P../.... ........
A920:  C2 3D 1E 00 7F 03 E9 03  00 E9 E7 FB B8 1A 00 F7   .=...... ........
A930:  6E D8 8B D8 8E 06 8C 0D  26 8B 87 F6 85 8B C8 B8   n....... &.......
A940:  1A 00 F7 6E F8 8B D8 26  39 8F F6 85 74 03 E9 9D   ...n...& 9...t...
A950:  00 B8 1A 00 F7 6E D8 8B  D8 26 8B 87 F8 85 25 FB   .....n.. .&....%.
A960:  FF 0D 02 00 8B C8 B8 1A  00 F7 6E D8 8B D8 26 89   ........ ..n...&.
A970:  8F F8 85 B8 1A 00 F7 6E  F8 8B D8 26 8B 87 F8 85   .......n ...&....
A980:  25 FB FF 0D 02 00 8B C8  B8 1A 00 F7 6E F8 8B D8   %....... ....n...
A990:  26 89 8F F8 85 83 7E E4  06 7C 03 E9 09 00 83 7E   &.....~. .|.....~
A9A0:  E6 06 7D 03 E9 22 00 8B  46 D8 8B 1E 98 4D D1 E3   ..}.."..  F....M..
A9B0:  D1 E3 89 87 52 4C 8B 46  F8 8B 1E 98 4D D1 E3 D1   ....RL.F ....M...
A9C0:  E3 89 87 54 4C FF 06 98  4D 83 7E EA 00 75 03 E9   ...TL... M.~..u..
A9D0:  19 00 B8 1A 00 F7 6E D8  8B D8 8E 06 8C 0D 26 FF   ......n. ......&.
A9E0:  B7 F6 85 9A 52 0D 96 07  83 C4 02 E9 18 00 8D 46   ....R... .......F
A9F0:  DC 16 50 8D 46 DE 16 50  FF 76 F8 FF 76 D8 9A 99   ..P.F..P .v..v...
AA00:  17 96 07 83 C4 0C E9 0A  FB 5E 5F 8B E5 5D CB 55   ........ .^_..].U
AA10:  8B EC 81 EC 30 00 57 56  B8 00 00 50 9A 1A 0B 55   ....0.WV ...P...U
AA20:  00 83 C4 02 C7 46 EA 00  00 E9 03 00 FF 46 EA A1   .....F.. .....F..
AA30:  9E 4D 39 46 EA 7C 03 E9  D9 04 8E 06 8C 0D 8B 5E   .M9F.|.. .......^
AA40:  EA 8B C3 D1 E3 03 D8 D1  E3 26 8B 87 24 D7 89 46   ........ .&..$..F
AA50:  D0 B8 1A 00 F7 6E D0 8B  D8 26 83 BF E0 85 00 7D   .....n.. .&.....}
AA60:  03 E9 AC 04 B8 1A 00 F7  6E D0 8B D8 26 F6 87 F8   ........ n...&...
AA70:  85 06 74 03 E9 99 04 B8  1A 00 F7 6E D0 8B D8 26   ..t..... ...n...&
AA80:  83 BF F0 85 00 7C 03 E9  86 04 C7 46 E8 00 00 B8   .....|.. ...F....
AA90:  1A 00 F7 6E D0 8B D8 26  83 BF EA 85 00 7C 03 E9   ...n...& .....|..
AAA0:  18 00 B8 1A 00 F7 6E D0  8B D8 26 8B 87 E6 85 89   ......n. ..&.....
AAB0:  46 FA C7 46 E8 01 00 E9  14 00 B8 1A 00 F7 6E D0   F..F.... ......n.
AAC0:  8B D8 8E 06 8C 0D 26 8B  87 EC 85 89 46 FA 83 7E   ......&. ....F..~
AAD0:  FA 00 7C 03 E9 03 00 E9  52 FF 81 7E FA B4 00 7C   ..|..... R..~...|
AAE0:  03 E9 08 00 81 46 FA B4  00 E9 05 00 81 6E FA B4   .....F.. .....n..
AAF0:  00 8B 46 EA 89 46 DE E9  03 00 FF 4E DE 83 7E DE   ..F..F.. ...N..~.
AB00:  00 7F 03 E9 35 00 8E 06  8C 0D 8B 5E EA 8B C3 D1   ....5... ...^....
AB10:  E3 03 D8 D1 E3 26 8B 87  20 D7 8B 5E DE 8B CB D1   .....&.. ..^....
AB20:  E3 03 D9 D1 E3 26 2B 87  20 D7 3D 0A 00 7F 03 E9   .....&+. .=......
AB30:  06 00 FF 46 DE E9 03 00  E9 BF FF C7 46 E0 C8 00   ...F.... ....F...
AB40:  B8 B4 00 89 46 E6 89 46  E2 B8 1A 00 F7 6E D0 8B   ....F..F .....n..
AB50:  D8 8E 06 8C 0D 26 8B 87  E0 85 89 46 FC B8 1A 00   .....&.. ...F....
AB60:  F7 6E D0 8B D8 26 8B 87  E2 85 89 46 FE C7 46 F8   .n...&.. ...F..F.
AB70:  FF FF 8B 46 DE 89 46 DC  E9 03 00 FF 46 DC A1 9E   ...F..F. ....F...
AB80:  4D 39 46 DC 7C 03 E9 AA  02 8B 46 DC 39 46 EA 74   M9F.|... ..F.9F.t
AB90:  03 E9 03 00 E9 E4 FF 8E  06 8C 0D 8B 5E DC 8B C3   ........ ....^...
ABA0:  D1 E3 03 D8 D1 E3 26 8B  87 20 D7 8B 5E EA 8B CB   ......&. . ..^...
ABB0:  D1 E3 03 D9 D1 E3 26 2B  87 20 D7 3D 0A 00 7F 03   ......&+ . .=....
ABC0:  E9 03 00 E9 6D 02 8E 06  8C 0D 8B 5E DC 8B C3 D1   ....m... ...^....
ABD0:  E3 03 D8 D1 E3 26 8B 87  24 D7 89 46 D2 B8 1A 00   .....&.. $..F....
```

```
ABE0:  F7 6E D2 8B D8 26 83 BF  E0 85 00 7D 03 E9 40 02   .n...&.. ...}..@.
ABF0:  B8 1A 00 F7 6E D2 8B D8  26 F6 87 F8 85 06 74 03   ....n... &.....t.
AC00:  E9 2D 02 B8 1A 00 F7 6E  D2 8B D8 26 83 BF F0 85   .-.....n ...&....
AC10:  00 7C 03 E9 1A 02 B8 1A  00 F7 6E D0 8B D8 8B 46   .|...... ..n....F
AC20:  D2 26 39 87 E4 85 75 03  E9 15 00 B8 1A 00 F7 6E   .&9...u. .......n
AC30:  D2 8B D8 8B 46 D0 26 39  87 E4 85 74 03 E9 03 00   ....F.&9 ...t....
AC40:  E9 38 FF B8 1A 00 F7 6E  D2 8B D8 8E 06 8C 0D 26   .8.....n .......&
AC50:  83 BF EA 85 00 7C 03 E9  18 00 B8 1A 00 F7 6E D2   .....|.. ......n.
AC60:  8B D8 26 8B 87 E6 85 89  46 F6 C7 46 E8 01 00 E9   ..&..... F..F....
AC70:  14 00 B8 1A 00 F7 6E D2  8B D8 8E 06 8C 0D 26 8B   ......n. ......&.
AC80:  87 EC 85 89 46 F6 83 7E  F6 00 7C 03 E9 03 00 E9   ....F..~ ..|.....
AC90:  E9 FE 8B 46 FA 2B 46 F6  50 9A 04 2F AB 10 83 C4   ...F.+F. P../....
ACA0:  02 89 46 F0 81 7E F0 B4  00 7F 03 E9 09 00 B8 68   ..F..~.. .......h
ACB0:  01 2B 46 F0 89 46 F0 B8  1A 00 F7 6E D2 8B D8 8E   .+F..F.. ...n....
ACC0:  06 8C 0D 26 8B 87 E0 85  2B 46 FC 50 9A 04 2F AB   ...&.... +F.P../.
ACD0:  10 83 C4 02 89 46 EC B8  1A 00 F7 6E D2 8B D8 8E   .....F.. ...n....
ACE0:  06 8C 0D 26 8B 87 E2 85  2B 46 FE 50 9A 04 2F AB   ...&.... +F.P../.
ACF0:  10 83 C4 02 89 46 EE 8B  46 EC 99 52 50 52 50 9A   .....F.. F..RPRP.
AD00:  74 30 AB 10 8B C8 8B 46  EE 8B DA 99 52 50 52 50   t0.....F ....RPRP
AD10:  8B F1 8B FB 9A 74 30 AB  10 03 F0 13 FA 89 76 D6   .....t0. ......v.
AD20:  89 7E D8 83 7E D8 00 7D  03 E9 12 00 7E 03 E9 0A   .~..~..} ....~...
AD30:  00 81 7E D6 C8 00 77 03  E9 03 00 E9 3D FE 83 7E   ..~...w. ....=..~
AD40:  D8 00 7D 03 E9 A1 00 7E  03 E9 09 00 83 7E D6 32   ..}....~ .....~.2
AD50:  77 03 E9 93 00 83 7E F0  1E 7F 03 E9 03 00 E9 1A   w.....~. ........
AD60:  FE B8 1A 00 F7 6E D2 8B  D8 8E 06 8C 0D 26 8B 87   .....n.. .....&..
AD70:  E0 85 8B C8 B8 1A 00 F7  6E D0 8B D8 26 2B 8F E0   ........ n...&+..
AD80:  85 51 B8 1A 00 F7 6E D2  8B D8 26 8B 87 E2 85 8B   .Q....n. ..&.....
AD90:  C8 B8 1A 00 F7 6E D0 8B  D8 26 2B 8F E2 85 51 9A   .....n.. .&+...Q.
ADA0:  CE 01 24 00 83 C4 04 89  46 F2 8B 46 F6 03 46 FA   ..$..... F..F..F.
ADB0:  99 2B C2 D1 F8 2B 46 F2  F7 D8 50 9A 04 2F AB 10   .+...+F. ..P../..
ADC0:  83 C4 02 89 46 F4 81 7E  F4 B4 00 7F 03 E9 09 00   ....F..~ ........
ADD0:  B8 68 01 2B 46 F4 89 46  F4 83 7E F4 1E 7F 03 E9   .h.+F..F ..~.....
ADE0:  03 00 E9 96 FD E9 11 00  83 7E F0 2D 7F 03 E9 03   ........ .~.-....
ADF0:  00 E9 87 FD C7 46 F4 00  00 8B 46 D6 03 46 F4 03   .....F.. ..F..F..
AE00:  46 F0 8B 4E E6 03 4E E2  03 4E E0 3B C1 7C 03 E9   F..N..N. .N.;.|..
AE10:  1E 00 8B 46 D6 89 46 E0  8B 46 F4 89 46 E6 8B 46   ...F..F. .F..F..F
AE20:  F0 89 46 E2 8B 46 D2 89  46 F8 8B 46 DC 89 46 E4   ..F..F.. F..F..F.
AE30:  E9 48 FD 83 7E F8 FF 74  03 E9 03 00 E9 ED FB B8   .H..~..t ........
AE40:  1A 00 F7 6E F8 8B D8 8E  06 8C 0D 26 8B 87 F6 85   ...n.... ...&....
AE50:  8B C8 B8 1A 00 F7 6E D0  8B D8 26 39 8F F6 85 74   ......n. ..&9...t
AE60:  03 E9 94 00 B8 1A 00 F7  6E D0 8B D8 26 8B 87 F8   ........ n...&...
AE70:  85 25 FB FF 0D 02 00 8B  C8 B8 1A 00 F7 6E D0 8B   .%...... .....n..
AE80:  D8 26 89 8F F8 85 B8 1A  00 F7 6E F8 8B D8 26 8B   .&...... ..n...&.
AE90:  87 F8 85 25 FB FF 0D 02  00 8B C8 B8 1A 00 F7 6E   ...%.... .......n
AEA0:  F8 8B D8 26 89 8F F8 85  83 7E E0 24 7D 03 E9 22   ...&.... .~.$}.."
AEB0:  00 8B 46 D0 8B 1E 98 4D  D1 E3 D1 E3 89 87 52 4C   ..F....M ......RL
AEC0:  8B 46 F8 8B 1E 98 4D D1  E3 D1 E3 89 87 54 4C FF   .F....M. .....TL.
AED0:  06 98 4D 83 7E E8 00 75  03 E9 19 00 B8 1A 00 F7   ..M.~..u ........
AEE0:  6E D0 8B D8 8E 06 8C 0D  26 FF B7 F6 85 9A 52 0D   n....... &.....R.
AEF0:  96 07 83 C4 02 E9 18 00  8D 46 D4 16 50 8D 46 DA   ........ .F..P.F.
AF00:  16 50 FF 76 F8 FF 76 D0  9A 99 17 96 07 83 C4 0C   .P.v..v. ........
AF10:  E9 19 FB 5E 5F 8B E5 5D  CB 55 8B EC 81 EC 28 00   ...^_..] .U....(.
AF20:  57 56 C7 46 F8 00 00 E9  03 00 FF 46 F8 8E 06 8C   WV.F.... ...F....
AF30:  0D 8B 46 F8 26 39 06 2A  84 7F 03 E9 5C 06 8B 5E   ..F.&9.* ....\..^
```

```
AF40:  F8 D1 E3 26 8B 87 50 84  89 46 E2 3D 00 00 7C 03   ...&..P. .F.=..|.
AF50:  E9 03 00 E9 D4 FF FF 76  E2 B8 E0 85 B9 C2 13 51   .......v .......Q
AF60:  50 9A 06 00 55 00 83 C4  06 89 46 E2 3D 00 00 7D   P...U... ..F.=..}
AF70:  03 E9 23 06 B8 1A 00 F7  6E E2 8B D8 8E 06 8C 0D   ..#..... n.......
AF80:  26 83 BF E4 85 00 7D 03  E9 09 06 B8 1A 00 F7 6E   &.....}. .......n
AF90:  E2 8B D8 26 83 BF E8 85  0F 7C 03 E9 08 00 C7 46   ...&.... .|.....F
AFA0:  F0 00 00 E9 22 00 B8 1A  00 F7 6E E2 8B D8 8E 06   ...."... ..n.....
AFB0:  8C 0D 26 83 BF F4 85 0F  7C 03 E9 08 00 C7 46 F0   ..&..... |.....F.
AFC0:  02 00 E9 03 00 E9 8E FF  B8 1A 00 F7 6E E2 8B D8   ........ ....n...
AFD0:  8B 46 F0 8B C8 D1 E0 03  C1 D1 E0 03 D8 8E 06 8C   .F...... ........
AFE0:  0D 26 8B 87 E4 85 89 46  F2 B8 1A 00 F7 6E F2 8B   .&.....F .....n..
AFF0:  D8 26 83 BF E4 85 00 7C  03 E9 03 00 E9 57 FF B8   .&.....| .....W..
B000:  1A 00 F7 6E F2 8B D8 8E  06 8C 0D 26 83 BF E8 85   ...n.... ...&....
B010:  05 7D 03 E9 26 00 B8 1A  00 F7 6E F2 8B D8 26 83   .}..&... ..n...&.
B020:  BF F4 85 05 7C 03 E9 16  00 B8 1A 00 F7 6E F2 8B   ....|... .....n..
B030:  D8 26 83 BF F0 85 00 7D  03 E9 03 00 E9 17 FF 8E   .&.....} ........
B040:  06 8C 0D 26 A1 2A 84 26  FF 06 2A 84 89 46 F4 26   ...&.*.& ..*..F.&
B050:  81 3E 2A 84 C7 00 74 03  E9 06 00 B8 FA FF E9 3F   .>*...t. .......?
B060:  05 B8 1A 00 F7 6E F2 8B  D8 8E 06 8C 0D 26 8B 87   .....n.. .....&..
B070:  E4 85 89 46 E6 B8 1A 00  F7 6E F2 8B D8 26 8B 87   ...F.... .n...&..
B080:  F0 85 89 46 FA B8 1A 00  F7 6E F2 8B D8 26 8B 87   ...F.... .n...&..
B090:  E6 85 89 46 EA B8 1A 00  F7 6E F2 8B D8 26 8B 87   ...F.... .n...&..
B0A0:  F2 85 89 46 FE 83 7E F0  00 74 03 E9 43 00 B8 1A   ...F..~. .t..C...
B0B0:  00 F7 6E E2 8B D8 26 8B  87 EA 85 89 46 EE B8 1A   ..n...&. ....F...
B0C0:  00 F7 6E E2 8B D8 26 8B  87 F0 85 89 46 E8 B8 1A   ..n...&. ....F...
B0D0:  00 F7 6E E2 8B D8 26 8B  87 EC 85 89 46 F6 B8 1A   ..n...&. ....F...
B0E0:  00 F7 6E E2 8B D8 26 8B  87 F2 85 89 46 EC E9 44   ..n...&. ....F..D
B0F0:  00 B8 1A 00 F7 6E E2 8B  D8 8E 06 8C 0D 26 8B 87   .....n.. .....&..
B100:  E4 85 89 46 EE B8 1A 00  F7 6E E2 8B D8 26 8B 87   ...F.... .n...&..
B110:  EA 85 89 46 E8 B8 1A 00  F7 6E E2 8B D8 26 8B 87   ...F.... .n...&..
B120:  E6 85 89 46 F6 B8 1A 00  F7 6E E2 8B D8 26 8B 87   ...F.... .n...&..
B130:  EC 85 89 46 EC 8B 46 F6  2B 46 EC 50 9A 04 2F AB   ...F..F. +F.P../.
B140:  10 83 C4 02 B9 68 01 99  F7 F9 8B 46 F6 2B 46 EC   .....h.. ...F.+F.
B150:  50 8B F2 9A 04 2F AB 10  83 C4 02 B9 68 01 99 F7   P..../.. ....h...
B160:  F9 81 EA 68 01 F7 DA 3B  D6 7E 03 E9 1F 00 8B 46   ...h...; .~.....F
B170:  F6 2B 46 EC 50 9A 04 2F  AB 10 83 C4 02 B9 68 01   .+F.P../ ......h.
B180:  99 F7 F9 8B C2 2D 68 01  F7 D8 E9 17 00 8B 46 F6   .....-h. ......F.
B190:  2B 46 EC 50 9A 04 2F AB  10 83 C4 02 B9 68 01 99   +F.P../. .....h..
B1A0:  F7 F9 8B C2 89 46 DE 8B  46 EA 2B 46 FE 50 9A 04   .....F.. F.+F.P..
B1B0:  2F AB 10 83 C4 02 B9 68  01 99 F7 F9 8B 46 EA 2B   /......h .....F.+
B1C0:  46 FE 50 8B F2 9A 04 2F  AB 10 83 C4 02 B9 68 01   F.P..../ ......h.
B1D0:  99 F7 F9 81 EA 68 01 F7  DA 3B D6 7E 03 E9 1F 00   .....h.. .;.~....
B1E0:  8B 46 EA 2B 46 FE 50 9A  04 2F AB 10 83 C4 02 B9   .F.+F.P. ./......
B1F0:  68 01 99 F7 F9 8B C2 2D  68 01 F7 D8 E9 17 00 8B   h......- h.......
B200:  46 EA 2B 46 FE 50 9A 04  2F AB 10 83 C4 02 B9 68   F.+F.P.. /......h
B210:  01 99 F7 F9 8B C2 89 46  DC 8B 46 EA 2B 46 F6 50   .......F ..F.+F.P
B220:  9A 04 2F AB 10 83 C4 02  B9 68 01 99 F7 F9 8B 46   ../..... .h.....F
B230:  EA 2B 46 F6 50 8B F2 9A  04 2F AB 10 83 C4 02 B9   .+F.P... ./......
B240:  68 01 99 F7 F9 81 EA 68  01 F7 DA 3B D6 7E 03 E9   h......h ...;.~..
B250:  1F 00 8B 46 EA 2B 46 F6  50 9A 04 2F AB 10 83 C4   ...F.+F. P../....
B260:  02 B9 68 01 99 F7 F9 8B  C2 2D 68 01 F7 D8 E9 17   ..h..... .-h.....
B270:  00 8B 46 EA 2B 46 F6 50  9A 04 2F AB 10 83 C4 02   ..F.+F.P ../.....
B280:  B9 68 01 99 F7 F9 8B C2  89 46 DA 8B 46 FE 2B 46   .h...... .F..F.+F
B290:  EC 50 9A 04 2F AB 10 83  C4 02 B9 68 01 99 F7 F9   .P../... ...h....
```

```
B2A0:  8B 46 FE 2B 46 EC 50 8B  F2 9A 04 2F AB 10 83 C4   .F.+F.P. .../....
B2B0:  02 B9 68 01 99 F7 F9 81  EA 68 01 F7 DA 3B D6 7E   ..h..... .h...;.~
B2C0:  03 E9 1F 00 8B 46 FE 2B  46 EC 50 9A 04 2F AB 10   .....F.+ F.P../..
B2D0:  83 C4 02 B9 68 01 99 F7  F9 8B C2 2D 68 01 F7 D8   ....h... ...-h...
B2E0:  E9 17 00 8B 46 FE 2B 46  EC 50 9A 04 2F AB 10 83   ....F.+F .P../...
B2F0:  C4 02 B9 68 01 99 F7 F9  8B C2 03 46 DA 8B 4E DE   ...h.... ...F..N.
B300:  03 4E DC 3B C1 7C 03 E9  BF 00 B8 1A 00 F7 6E F2   .N.;.|.. ......n.
B310:  8B D8 8E 06 8C 0D 26 8B  87 E8 85 8B C8 B8 1A 00   ......&. ........
B320:  F7 6E F2 8B D8 26 03 8F  F4 85 89 4E E0 B8 1A 00   .n...&.. ...N....
B330:  F7 6E E6 8B D8 8B 46 FA  26 89 87 EA 85 B8 1A 00   .n....F. &.......
B340:  F7 6E E6 8B D8 8B 46 E0  26 89 87 EE 85 B8 1A 00   .n....F. &.......
B350:  F7 6E FA 8B D8 8B 46 E6  26 89 87 EA 85 B8 1A 00   .n....F. &.......
B360:  F7 6E FA 8B D8 8B 46 E0  26 89 87 EE 85 B8 F4 FF   .n....F. &.......
B370:  50 FF 76 E6 B8 E0 85 06  50 9A 11 06 55 00 83 C4   P.v..... P...U...
B380:  08 89 46 E4 B8 1A 00 F7  6E F2 8B D8 8E 06 8C 0D   ..F..... n.......
B390:  26 C7 87 E0 85 FF FF 26  FF 0E 2C 84 B8 1A 00 F7   &......& ..,.....
B3A0:  6E E2 8B D8 8B 46 F0 8B  C8 D1 E0 03 C1 D1 E0 03   n....F.. ........
B3B0:  D8 26 C7 87 E4 85 FF FF  FF 76 E2 9A A9 07 96 07   .&...... .v......
B3C0:  83 C4 02 89 46 E2 E9 7E  01 83 7E F0 00 74 03 E9   ....F..~ ..~..t..
B3D0:  BC 00 B8 1A 00 F7 6E F2  8B D8 8E 06 8C 0D 26 8B   ......n. ......&.
B3E0:  87 F4 85 8B C8 B8 1A 00  F7 6E E2 8B D8 26 03 8F   ........ .n...&..
B3F0:  F4 85 89 4E E0 B8 1A 00  F7 6E FA 8B D8 8B 46 E8   ...N.... .n....F.
B400:  26 89 87 EA 85 B8 1A 00  F7 6E FA 8B D8 8B 46 E0   &....... .n....F.
B410:  26 89 87 EE 85 B8 1A 00  F7 6E E8 8B D8 8B 46 FA   &....... .n....F.
B420:  26 89 87 EA 85 B8 1A 00  F7 6E E8 8B D8 8B 46 E0   &....... .n....F.
B430:  26 89 87 EE 85 B8 F4 FF  50 FF 76 FA B8 E0 85 06   &....... P.v.....
B440:  50 9A 11 06 55 00 83 C4  08 89 46 E4 B8 1A 00 F7   P...U... ..F.....
B450:  6E F2 8B D8 8E 06 8C 0D  26 C7 87 F0 85 FF FF FF   n....... &.......
B460:  76 F2 9A A9 07 96 07 83  C4 02 B8 1A 00 F7 6E E2   v....... ......n.
B470:  8B D8 8E 06 8C 0D 26 C7  87 F0 85 FF FF FF 76 E2   ......&. ......v.
B480:  9A A9 07 96 07 83 C4 02  89 46 E2 E9 B9 00 B8 1A   ........ .F......
B490:  00 F7 6E F2 8B D8 8E 06  8C 0D 26 8B 87 E8 85 8B   ..n..... ..&.....
B4A0:  C8 B8 1A 00 F7 6E E2 8B  D8 26 03 8F E8 85 89 4E   .....n.. .&.....N
B4B0:  E0 B8 1A 00 F7 6E E6 8B  D8 8B 46 EE 26 89 87 EA   .....n.. ..F.&...
B4C0:  85 B8 1A 00 F7 6E E6 8B  D8 8B 46 E0 26 89 87 EE   .....n.. ..F.&...
B4D0:  85 B8 1A 00 F7 6E EE 8B  D8 8B 46 E6 26 89 87 EA   .....n.. ..F.&...
B4E0:  85 B8 1A 00 F7 6E EE 8B  D8 8B 46 E0 26 89 87 EE   .....n.. ..F.&...
B4F0:  85 B8 F4 FF 50 FF 76 E6  B8 E0 85 06 50 9A 11 06   ....P.v. ....P...
B500:  55 00 83 C4 08 89 46 E4  B8 1A 00 F7 6E F2 8B D8   U.....F. ....n...
B510:  8E 06 8C 0D 26 C7 87 E4  85 FF FF FF 76 F2 9A A9   ....&... ....v...
B520:  07 96 07 83 C4 02 B8 1A  00 F7 6E E2 8B D8 8E 06   ........ ..n.....
B530:  8C 0D 26 C7 87 E4 85 FF  FF FF 76 E2 9A A9 07 96   ..&..... ..v.....
B540:  07 83 C4 02 89 46 E2 8B  46 E4 8E 06 8C 0D 8B 5E   .....F.. F......^
B550:  F4 D1 E3 26 89 87 50 84  FF 76 F4 FF 76 F4 9A F6   ...&..P. .v..v...
B560:  16 96 07 83 C4 04 89 46  FC B8 1A 00 F7 6E E4 8B   .......F .....n..
B570:  D8 8E 06 8C 0D 26 F6 87  F8 85 06 75 03 E9 0B 00   .....&.. ...u....
B580:  FF 76 F4 9A 52 0D 96 07  83 C4 02 8E 06 8C 0D 26   .v..R... .......&
B590:  FF 06 4E 84 E9 BF F9 E9  90 F9 B8 00 00 E9 00 00   ..N..... ........
B5A0:  5E 5F 8B E5 5D CB 55 8B  EC 81 EC 1C 00 57 56 C7   ^_..].U. .....WV.
B5B0:  46 F0 00 00 E9 03 00 FF  46 F0 8B 46 F0 39 06 98   F....... F..F.9..
B5C0:  4D 7F 03 E9 97 02 8B 5E  F0 D1 E3 D1 E3 8B 87 52   M......^ .......R
B5D0:  4C 89 46 E4 8B 5E F0 D1  E3 D1 E3 8B 87 54 4C 89   L.F..^.. .....TL.
B5E0:  46 FE B8 1A 00 F7 6E FE  8B D8 8E 06 8C 0D 26 8B   F.....n. ......&.
B5F0:  87 F6 85 8B C8 B8 1A 00  F7 6E E4 8B D8 26 39 8F   ........ .n...&9.
```

```
B600:  F6 85 75 03 E9 10 01 B8  1A 00 F7 6E E4 8B D8 26   ..u..... ...n...&
B610:  83 BF EA 85 00 7D 03 E9  13 00 B8 1A 00 F7 6E FE   .....}.. ......n.
B620:  8B D8 26 83 BF EA 85 00  7C 03 E9 CF 00 B8 1A 00   ..&..... |.......
B630:  F7 6E E4 8B D8 8E 06 8C  0D 26 8B 87 F6 85 89 46   .n...... .&.....F
B640:  FC 8B 5E FC D1 E3 26 8B  87 50 84 89 46 E8 FF 76   ..^...&. .P..F..v
B650:  E8 B8 E0 85 B9 C2 13 51  50 9A 06 00 55 00 83 C4   .......Q P...U...
B660:  06 89 46 E8 3D 00 00 7D  03 E9 59 00 B8 1A 00 F7   ..F.=..} ..Y.....
B670:  6E E8 8B D8 8E 06 8C 0D  26 83 BF E4 85 00 7C 03   n....... &.....|.
B680:  E9 3F 00 B8 1A 00 F7 6E  E8 8B D8 26 83 BF F0 85   .?.....n ...&....
B690:  00 7C 03 E9 2C 00 B8 1A  00 F7 6E E8 8B D8 26 F6   .|..,... ..n...&.
B6A0:  87 F8 85 06 74 03 E9 19  00 8B 46 E4 39 46 E8 75   ....t... ..F.9F.u
B6B0:  03 E9 0E 00 8B 46 FE 39  46 E8 75 03 E9 03 00 E9   .....F.9 F.u.....
B6C0:  03 00 E9 89 FF 83 7E E8  00 7D 03 E9 2B 00 B8 FF   ......~. .}..+...
B6D0:  FF 50 FF 76 E8 B8 E0 85  B9 C2 13 51 50 9A EC 03   .P.v.... ...QP...
B6E0:  55 00 83 C4 08 8B 46 E8  8E 06 8C 0D 8B 5E FC D1   U.....F. .....^..
B6F0:  E3 26 89 87 50 84 E9 03  00 E9 BB FE 8D 46 EA 16   .&..P... .....F..
B700:  50 8D 46 EC 16 50 FF 76  FE FF 76 E4 9A 99 17 96   P.F..P.v ..v.....
B710:  07 83 C4 0C E9 43 01 B8  1A 00 F7 6E E4 8B D8 8E   .....C.. ...n....
B720:  06 8C 0D 26 8B 87 EA 85  89 46 F6 B8 1A 00 F7 6E   ...&.... .F.....n
B730:  FE 8B D8 26 8B 87 EA 85  89 46 F4 8B 46 F6 39 46   ...&.... .F..F.9F
B740:  F4 74 03 E9 2B 00 FF 76  E4 9A A9 07 96 07 83 C4   .t..+..v ........
B750:  02 FF 76 FE 9A A9 07 96  07 83 C4 02 B8 1A 00 F7   ..v..... ........
B760:  6E F6 8B D8 8E 06 8C 0D  26 83 A7 F8 85 F7 E9 E9   n....... &.......
B770:  00 B8 1A 00 F7 6E F4 8B  D8 8E 06 8C 0D 8B 46 F6   .....n.. ......F.
B780:  26 39 87 EA 85 74 03 E9  0F 00 8B 46 F6 89 46 EE   &9...t.. ...F..F.
B790:  8B 46 F4 89 46 F8 E9 2B  00 B8 1A 00 F7 6E F6 8B   .F..F..+ .....n..
B7A0:  D8 8E 06 8C 0D 8B 46 F4  26 39 87 EA 85 74 03 E9   ......F. &9...t..
B7B0:  0F 00 8B 46 F4 89 46 EE  8B 46 F6 89 46 F8 E9 03   ...F..F. .F..F...
B7C0:  00 E9 F3 FD FF 76 E4 9A  A9 07 96 07 83 C4 02 FF   .....v.. ........
B7D0:  76 FE 9A A9 07 96 07 83  C4 02 B8 1A 00 F7 6E EE   v....... ......n.
B7E0:  8B D8 8E 06 8C 0D 26 83  BF E4 85 00 7F 03 E9 06   ......&. ........
B7F0:  00 B8 02 00 E9 03 00 B8  00 00 89 46 F2 B8 1A 00   ........ ...F....
B800:  F7 6E F8 8B D8 8E 06 8C  0D 26 83 BF E4 85 00 7F   .n...... .&......
B810:  03 E9 06 00 B8 02 00 E9  03 00 B8 00 00 89 46 FA   ........ ......F.
B820:  B8 1A 00 F7 6E E4 8B D8  8E 06 8C 0D 26 8B 87 EE   ....n... ....&...
B830:  85 8B C8 B8 1A 00 F7 6E  FE 8B D8 26 03 8F EE 85   .......n ...&....
B840:  89 4E E6 FF 76 E6 FF 76  FA FF 76 F8 FF 76 F2 FF   .N..v..v ..v..v..
B850:  76 EE 9A 58 05 96 07 83  C4 0A E9 5A FD 5E 5F 8B   v..X.... ...Z.^_.
B860:  E5 5D CB 55 8B EC 81 EC  0A 00 57 56 B8 1A 00 F7   .].U.... ..WV....
B870:  6E 06 8B D8 8E 06 8C 0D  26 83 BF EA 85 FF 74 03   n....... &.....t.
B880:  E9 06 00 B8 00 00 E9 0C  01 B8 1A 00 F7 6E 06 8B   ........ .....n..
B890:  D8 8E 06 8C 0D 26 8B 87  E4 85 89 46 FE B8 1A 00   .....&.. ...F....
B8A0:  F7 6E 06 8B D8 26 83 BF  F0 85 FF 75 03 E9 06 00   .n...&.. ...u....
B8B0:  B8 00 00 E9 DF 00 B8 1A  00 F7 6E FE 8B D8 8E 06   ........ ..n.....
B8C0:  8C 0D 26 8B 87 F0 85 89  46 F6 B8 1A 00 F7 6E 06   ..&..... F.....n.
B8D0:  8B D8 26 8B 87 E0 85 89  46 F8 B8 1A 00 F7 6E 06   ..&..... F.....n.
B8E0:  8B D8 26 8B 87 E2 85 89  46 FA B8 1A 00 F7 6E F6   ..&..... F.....n.
B8F0:  8B D8 8B 46 F8 26 2B 87  E0 85 50 9A 04 2F AB 10   ...F.&+. ..P../..
B900:  83 C4 02 3D 0A 00 7E 03  E9 25 00 B8 1A 00 F7 6E   ...=..~. .%.....n
B910:  F6 8B D8 8E 06 8C 0D 8B  46 FA 26 2B 87 E2 85 50   ........ F.&+...P
B920:  9A 04 2F AB 10 83 C4 02  3D 0A 00 7F 03 E9 06 00   ../..... =.......
B930:  B8 00 00 E9 5F 00 FF 76  FA FF 76 F8 9A EE 02 96   ...._..v ..v.....
B940:  07 83 C4 04 89 46 FC B8  00 00 50 B8 01 00 50 FF   .....F.. ..P...P.
B950:  76 FC B9 02 00 51 FF 76  06 9A 58 05 96 07 83 C4   v....Q.v ..X.....
```

```
B960:  0A B8 1A 00 F7 6E F6 8B  D8 8E 06 8C 0D 26 8B 87   .....n.. .....&..
B970:  EC 85 8B C8 B8 1A 00 F7  6E 06 8B D8 26 89 8F F2   ........ n...&...
B980:  85 FF 76 F6 FF 76 FC 9A  ED 21 96 07 83 C4 04 B8   ..v..v.. .!......
B990:  01 00 E9 00 00 5E 5F 8B  E5 5D CB 55 8B EC 81 EC   .....^_. .].U....
B9A0:  0C 00 57 56 C7 46 FE 00  00 B8 1A 00 C4 5E 0A 26   ..WV.F.. .....^.&
B9B0:  F7 2F 8B F0 C4 5E 06 26  83 78 E6 FF 74 03 E9 09   ./...^.& .x..t...
B9C0:  00 C4 5E 0A 26 FF 0F E9  DF FF C4 5E 0A 8B 46 0E   ..^.&... ...^..F.
B9D0:  26 39 07 75 03 E9 88 01  B8 1A 00 F7 6E FE 8B D8   &9.u.... ....n...
B9E0:  C4 76 06 26 83 38 FF 74  03 E9 6E 01 C4 5E 0A 26   .v.&.8.t ..n..^.&
B9F0:  FF 0F B8 1A 00 F7 6E FE  8B D8 C4 76 06 B8 1A 00   ......n. ...v....
BA00:  8C C1 C4 7E 0A 8B D6 8C  C0 8B F2 8E C1 C4 76 06   ...~.... ......v.
BA10:  50 8D 00 89 46 F4 8C 46  F6 58 8E C0 B8 1A 00 26   P...F..F .X.....&
BA20:  F7 2D 03 46 06 8B 56 08  1E 8B F0 8E DA C4 7E F4   .-.F..V. ......~.
BA30:  B9 0D 00 F3 A5 1F C7 46  FA 00 00 E9 03 00 FF 46   .......F .......F
BA40:  FA 83 7E FA 03 7C 03 E9  84 00 B8 1A 00 F7 6E FE   ..~..|.. ......n.
BA50:  8B 76 FA 8B CE D1 E6 03  F1 D1 E6 03 F0 C4 5E 06   .v...... ......^.
BA60:  26 8B 40 04 89 46 F8 83  7E F8 FF 75 03 E9 5B 00   &.@..F.. ~..u..[.
BA70:  C7 46 FC 00 00 E9 03 00  FF 46 FC 83 7E FC 03 7C   .F...... .F..~..|
BA80:  03 E9 47 00 C4 5E 0A 26  8B 07 8B C8 B8 1A 00 F7   ..G..^.& ........
BA90:  6E F8 8B 76 FC 8B D6 D1  E6 03 F2 D1 E6 03 F0 C4   n..v.... ........
BAA0:  5E 06 26 39 48 04 74 03  E9 1D 00 B8 1A 00 F7 6E   ^.&9H.t. .......n
BAB0:  F8 8B 76 FC 8B CE D1 E6  03 F1 D1 E6 03 F0 C4 5E   ..v..... .......^
BAC0:  06 8B 46 FE 26 89 40 04  E9 AD FF E9 70 FF B8 1A   ..F.&.@. ....p...
BAD0:  00 F7 6E FE 8B F0 C4 5E  06 26 83 78 0A FF 74 03   ..n....^ .&.x..t.
BAE0:  E9 43 00 C7 46 FC 00 00  E9 03 00 FF 46 FC C4 5E   .C..F... ....F..^
BAF0:  14 8B 46 FC 26 39 07 7F  03 E9 2A 00 C4 5E 0A 26   ..F.&9.. ..*..^.&
BB00:  8B 07 8B 5E FC D1 E3 C4  76 10 26 39 00 74 03 E9   ...^.... v.&9.t..
BB10:  11 00 8B 5E FC D1 E3 C4  76 10 8B 46 FE 26 89 00   ...^.... v..F.&..
BB20:  E9 03 00 E9 C5 FF B8 1A  00 C4 5E 0A 26 F7 2F 8B   ........ ..^.&./.
BB30:  D8 C4 76 06 26 C7 00 FF  FF B8 1A 00 C4 5E 0A 26   ..v.&... .....^.&
BB40:  F7 2F 8B F0 C4 5E 06 26  83 78 E6 FF 74 03 E9 09   ./...^.& .x..t...
BB50:  00 C4 5E 0A 26 FF 0F E9  DF FF FF 46 FE E9 6A FE   ..^.&... ...F..j.
BB60:  C7 46 FE 00 00 C4 5E 14  26 8B 37 D1 E6 C4 5E 10   .F....^. &.7...^.
BB70:  26 83 78 FE FF 74 03 E9  09 00 C4 5E 14 26 FF 0F   &.x..t.. ...^.&..
BB80:  E9 E2 FF C4 5E 14 8B 46  FE 26 39 07 7F 03 E9 67   ....^..F .&9....g
BB90:  00 8B 5E FE D1 E3 C4 76  10 26 83 38 FF 74 03 E9   ..^....v .&.8.t..
BBA0:  50 00 C4 5E 14 26 FF 0F  26 8B 1F D1 E3 C4 76 10   P..^.&.. &.....v.
BBB0:  26 8B 00 8B 5E FE D1 E3  C4 76 10 26 89 00 FF 76   &...^... .v.&...v
BBC0:  FE 8B 5E FE D1 E3 C4 76  10 26 FF 30 9A 21 17 96   ..^....v .&.0.!..
BBD0:  07 83 C4 04 C4 5E 14 26  8B 37 D1 E6 C4 5E 10 26   .....^.& .7...^.&
BBE0:  83 78 FE FF 74 03 E9 09  00 C4 5E 14 26 FF 0F E9   .x..t... ..^.&...
BBF0:  E2 FF FF 46 FE E9 8B FF  5E 5F 8B E5 5D CB 55 8B   ...F.... ^_..].U.
BC00:  EC 81 EC 06 00 57 56 C7  46 FC 00 00 E9 03 00 FF   .....WV. F.......
BC10:  46 FC 8E 06 8C 0D 8B 46  FC 26 39 06 2A 84 7F 03   F......F .&9.*...
BC20:  E9 59 00 8B 5E FC D1 E3  26 8B 87 50 84 89 46 FA   .Y..^... &..P..F.
BC30:  3D 00 00 7C 03 E9 03 00  E9 D4 FF 83 7E 06 00 75   =..|.... ....~..u
BC40:  03 E9 2A 00 B8 1A 00 F7  6E FA 8B D8 8E 06 8C 0D   ..*..... n.......
BC50:  26 8B 87 E4 85 89 46 FE  B8 1A 00 F7 6E FE 8B D8   &.....F. ....n...
BC60:  26 83 BF E4 85 00 7C 03  E9 03 00 E9 A1 FF FF 76   &.....|. .......v
BC70:  FC 9A 52 0D 96 07 83 C4  02 E9 93 FF 5E 5F 8B E5   ..R..... ....^_..
BC80:  5D CB 55 8B EC 81 EC 02  00 57 56 8B 46 06 A3 80   ].U..... .WV.F...
BC90:  4E B8 6E 4E 1E 50 B9 6C  4E 1E 51 9A B5 05 45 01   N.nN.P.l N.Q...E.
BCA0:  83 C4 08 FF 36 6E 4E FF  36 6C 4E 9A 65 08 45 01   ....6nN. 6lN.e.E.
BCB0:  83 C4 04 8E 06 94 0D 26  A3 EE 77 26 89 16 F0 77   .......& ..w&...w
```

```
BCC0:  26 A1 F0 77 26 0B 06 EE  77 74 03 E9 06 00 B8 FE   &..w&... wt......
BCD0:  FF E9 1A 00 8E 06 94 0D  26 A1 EE 77 26 8B 16 F0   ........ &..w&...
BCE0:  77 8E 06 96 0D 26 A3 1A  02 26 89 16 1C 02 5E 5F   w....&.. .&....^_
BCF0:  8B E5 5D CB 55 8B EC 81  EC 00 00 57 56 9A 8B 08   ..].U... ...WV...
BD00:  45 01 5E 5F 8B E5 5D CB  55 8B EC 81 EC 08 00 57   E.^_..]. U......W
BD10:  56 C7 46 FE 00 00 9A 11  00 C9 04 89 46 FA 83 7E   V.F..... ....F..~
BD20:  FA 00 75 03 E9 0B 00 9A  C6 00 A0 0F 8B 46 FA E9   ..u..... .....F..
BD30:  91 00 9A 0A 00 BC 0B 9A  8C 04 D0 01 3D 00 00 75   ........ ....=..u
BD40:  03 E9 0B 00 9A C6 00 A0  0F B8 F8 FF E9 74 00 9A   ........ .....t..
BD50:  08 15 BC 0B 89 46 FA 3D  00 00 75 03 E9 0B 00 9A   .....F.= ..u.....
BD60:  C6 00 A0 0F 8B 46 FA E9  59 00 8E 06 98 0D 26 83   .....F.. Y.....&.
BD70:  3E DE 00 00 75 03 E9 05  00 9A E9 01 96 07 B8 00   >...u... ........
BD80:  00 50 9A 31 24 C9 04 83  C4 02 9A 0E 00 96 07 89   .P.1$... ........
BD90:  46 FA 3D 00 00 75 03 E9  0B 00 9A C6 00 A0 0F 8B   F.=..u.. ........
BDA0:  46 FA E9 1E 00 9A E0 00  96 07 3D 00 00 74 03 E9   F....... ..=..t..
BDB0:  0B 00 9A C6 00 A0 0F B8  FC FF E9 06 00 B8 00 00   ........ ........
BDC0:  E9 00 00 5E 5F 8B E5 5D  CB 00 55 8B EC 81 EC 5C   ...^_..] ..U....\
BDD0:  00 57 56 8E 06 9A 0D 26  A1 E6 00 48 A3 94 4E 8E   .WV....& ...H..N.
BDE0:  06 9C 0D 26 A1 E8 00 48  A3 96 4E A1 94 4E 40 A3   ...&...H ..N..N@.
BDF0:  98 4E A1 96 4E 40 A3 9A  4E 9A 50 01 C9 04 C7 46   .N..N@.. N.P....F
BE00:  C2 00 00 E9 03 00 FF 46  C2 83 7E C2 08 7C 03 E9   .......F ..~..|..
BE10:  26 00 8B 5E C2 D1 E3 D1  E3 8B 87 D0 06 F7 2E 98   &..^.... ........
BE20:  4E 8B 5E C2 D1 E3 D1 E3  03 87 D2 06 8B 5E C2 D1   N.^..... .....^..
BE30:  E3 89 87 82 4E E9 CE FF  A1 98 4E 99 33 C2 2B C2   ....N... ..N.3.+.
BE40:  B9 02 00 D3 F8 33 C2 2B  C2 89 46 A4 A1 9A 4E 99   .....3.+ ..F...N.
BE50:  33 C2 2B C2 B9 02 00 D3  F8 33 C2 2B C2 89 46 FC   3.+..... .3.+..F.
BE60:  A1 98 4E 99 33 C2 2B C2  B9 03 00 D3 F8 33 C2 2B   ..N.3.+. .....3.+
BE70:  C2 89 46 A6 A1 9A 4E 99  33 C2 2B C2 B9 03 00 D3   ..F...N. 3.+.....
BE80:  F8 33 C2 2B C2 89 46 FE  B8 02 00 BA 00 00 52 50   .3.+..F. ......RP
BE90:  A1 9A 4E F7 2E 98 4E 52  50 9A DA 2F AB 10 8B C8   ..N...NR P../....
BEA0:  A1 98 4E 8B DA 99 2B C2  D1 F8 99 03 C8 13 DA 89   ..N...+. ........
BEB0:  4E E0 89 5E E2 C7 46 EC  FC FF A1 9A 4E 99 2B C2   N..^..F. ....N.+.
BEC0:  D1 F8 89 46 C4 C7 46 E4  00 00 E9 28 00 FF 46 E4   ...F..F. ...(..F.
BED0:  8B 46 E4 F7 6E EC 01 46  C4 A1 98 4E 99 52 50 8B   .F..n..F ...N.RP.
BEE0:  46 E4 F7 6E EC 52 50 9A  74 30 AB 10 01 46 E0 11   F..n.RP. t0...F..
BEF0:  56 E2 F7 5E EC 8B 46 FC  39 46 E4 7C 03 E9 C8 02   V..^..F. 9F.|....
BF00:  C7 46 F0 FC FF A1 98 4E  99 2B C2 D1 F8 89 46 CE   .F.....N .+....F.
BF10:  8B 46 E0 8B 56 E2 89 46  C8 89 56 CA C7 46 E6 00   .F..V..F ..V..F..
BF20:  00 E9 1C 00 FF 46 E6 8B  46 E6 F7 6E F0 01 46 CE   .....F.. F..n..F.
BF30:  8B 46 E6 F7 6E F0 99 01  46 C8 11 56 CA F7 5E F0   .F..n... F..V..^.
BF40:  8B 46 A4 39 46 E6 7C 03  E9 7A 02 8B 46 CE 99 33   .F.9F.|. .z..F..3
BF50:  C2 2B C2 B9 03 00 D3 F8  33 C2 2B C2 8B C8 8B 46   .+...... 3.+....F
BF60:  C4 8B D9 99 33 C2 2B C2  B9 03 00 D3 F8 33 C2 2B   ....3.+. .....3.+
BF70:  C2 F7 6E A6 03 D8 89 5E  CC 8B 46 C8 8B 56 CA 89   ..n....^ ..F..V..
BF80:  46 BE 89 56 C0 2B C0 89  46 EA 89 46 E8 B8 00 00   F..V.+.. F..F....
BF90:  89 46 BA 89 46 AC E9 10  00 FF 46 BA A1 98 4E 2D   .F..F... ..F...N-
BFA0:  04 00 99 01 46 BE 11 56  C0 83 7E BA 04 7C 03 E9   ....F..V ..~..|..
BFB0:  84 00 C7 46 B6 00 00 E9  0B 00 FF 46 B6 83 46 BE   ...F.... ...F..F.
BFC0:  01 83 56 C0 00 83 7E B6  04 7C 03 E9 59 00 8B 46   ..V...~. .|..Y..F
BFD0:  BE 8B 56 C0 8E 06 9E 0D  26 03 06 EE 77 83 D2 00   ..V..... &...w...
BFE0:  B9 0C 00 D3 E2 26 03 16  F0 77 8E C2 8B D8 26 8A   .....&.. .w....&.
BFF0:  07 88 46 F2 8A 46 F2 2A  E4 2B D2 01 46 E8 11 56   ..F..F.* .+..F..V
C000:  EA 80 7E F2 00 75 03 E9  12 00 80 7E F2 FF 75 03   ..~..u.. ...~..u.
C010:  E9 09 00 80 7E F2 7F 74  03 E9 08 00 C7 46 AC 01   ....~..t .....F..
```

EXTRACT.DMP Thursday, January 6, 1994 12:02pm Page 58

```
C020:  00 E9 03 00 E9 93 FF 83  7E AC 00 75 03 E9 03 00   ........ ~..u....
C030:  E9 03 00 E9 63 FF 83 7E  AC 00 75 03 E9 03 00 E9   ....c..~ ..u.....
C040:  E2 FE 8D 46 FA 16 50 8D  4E B4 16 51 16 51 FF 76   ...F..P. N..Q.Q.v
C050:  C4 FF 76 CE 9A DE 1A C9  04 83 C4 10 8B 46 FA D1   ..v..... .....F..
C060:  E0 05 7F 00 A3 F0 06 B8  10 00 BA 00 00 52 50 FF   ........ .....RP.
C070:  76 EA FF 76 E8 9A DA 2F  AB 10 89 46 A8 8B 46 A8   v..v.../ ...F..F.
C080:  39 06 F0 06 7C 03 E9 39  01 8B 46 CE 2D 0A 00 89   9...|..9 ..F.-...
C090:  46 C6 8B 46 C4 2D 0A 00  89 46 BC 83 7E C6 00 7C   F..F.-.. .F..~..|
C0A0:  03 E9 05 00 C7 46 C6 00  00 A1 98 4E 2D 18 00 3B   .....F.. ...N-..;
C0B0:  46 C6 7C 03 E9 09 00 A1  98 4E 2D 18 00 89 46 C6   F.|..... .N-...F.
C0C0:  83 7E BC 00 7C 03 E9 05  00 C7 46 BC 00 00 A1 9A   .~..|... ..F.....
C0D0:  4E 2D 18 00 3B 46 BC 7C  03 E9 09 00 A1 9A 4E 2D   N-..;F.| ......N-
C0E0:  18 00 89 46 BC 8B 46 C6  05 06 00 89 46 D2 8B 46   ...F..F. ....F..F
C0F0:  BC 05 06 00 89 46 D6 8B  46 C6 05 10 00 89 46 D4   .....F.. F.....F.
C100:  8B 46 BC 05 10 00 89 46  D8 8B 46 D2 03 46 D4 99   .F.....F ..F..F..
C110:  2B C2 D1 F8 89 46 DA 8B  46 D6 03 46 D8 99 2B C2   +....F.. F..F..+.
C120:  D1 F8 89 46 DC C7 46 AA  FF FF C7 46 EE FF FF C7   ...F..F. ...F....
C130:  46 B8 00 00 C7 06 F8 06  00 00 8D 46 B8 16 50 B8   F....... ...F..P.
C140:  01 00 50 8D 46 AA 16 50  8D 46 EE 16 50 2B C0 50   ..P.F..P .F..P+.P
C150:  50 2B C0 50 50 8D 46 D0  16 50 9A DC 2A D0 01 83   P+.PP.F. .P..*...
C160:  C4 1A 3D 00 00 7C 03 E9  03 00 E9 B7 FD 83 7E B8   ..=..|.. ......~.
C170:  00 74 03 E9 03 00 E9 AB  FD FF 76 EE 8D 46 F4 16   .t...... ..v..F..
C180:  50 8D 4E AE 16 51 8D 56  D0 16 52 9A 18 04 BC 0B   P.N..Q.V ..R.....
C190:  83 C4 0E 3D 00 00 7D 03  E9 27 00 C7 06 9C 4E 00   ...=..}. .'....N.
C1A0:  00 B8 01 00 50 FF 76 AA  FF 76 EE 8D 46 F4 16 50   ....P.v. .v..F..P
C1B0:  8D 46 AE 16 50 8D 46 D0  16 50 9A E7 11 BC 0B 83   .F..P.F. .P......
C1C0:  C4 12 E9 5F FD E9 05 FD  9A 04 04 D0 01 9A 45 20   ..._.... ......E
C1D0:  C9 04 5E 5F 8B E5 5D CB  55 8B EC 81 EC 10 00 57   ..^_..]. U......W
C1E0:  56 8E 06 A0 0D 26 A1 04  00 99 8E 06 A2 0D 8B C8   V....&.. ........
C1F0:  26 A1 06 00 8B DA F7 2E  98 4E 03 C8 13 DA 89 4E   &....... .N.....N
C200:  FA 89 5E FC 8B 46 FA 8B  56 FC 8E 06 9E 0D 26 03   ..^..F.. V.....&.
C210:  06 EE 77 83 D2 00 B9 0C  00 D3 E2 26 03 16 F0 77   ..w..... ...&...w
C220:  05 FF FF 1B C9 F7 D1 81  E1 00 10 2B D1 8E C2 8B   ........ ...+....
C230:  D8 26 80 3F 00 74 03 E9  2F 00 8B 46 FA 8B 56 FC   .&.?.t.. /..F..V.
C240:  89 46 F4 89 56 F6 8E 06  A0 0D 26 A1 04 00 89 46   .F..V... ..&....F
C250:  F8 8E 06 A2 0D 26 A1 06  00 89 46 F2 C7 46 F0 01   .....&.. ..F..F..
C260:  00 C7 46 FE 04 00 E9 C2  03 A1 98 4E 99 8B C8 8B   ..F..... ...N....
C270:  DA 8B 46 FA 8B 56 FC 2B  C1 1B D3 8E 06 9E 0D 26   ..F..V.+ .......&
C280:  03 06 EE 77 83 D2 00 B9  0C 00 D3 E2 26 03 16 F0   ...w.... ....&...
C290:  77 8E C2 8B D8 26 80 3F  00 74 03 E9 2F 00 8B 46   w....&.? .t../..F
C2A0:  FA 8B 56 FC 89 46 F4 89  56 F6 8E 06 A0 0D 26 A1   ..V..F.. V.....&.
C2B0:  04 00 89 46 F8 8E 06 A2  0D 26 A1 06 00 89 46 F2   ...F.... .&....F.
C2C0:  C7 46 F0 01 00 C7 46 FE  02 00 E9 5E 03 8B 46 12   .F....F. ...^..F.
C2D0:  2D 04 00 50 9A 04 2F AB  10 83 C4 02 3D 02 00 7C   -..P../. ....=..|
C2E0:  03 E9 A3 01 8E 06 A2 0D  26 A1 06 00 89 46 F2 C7   ........ &....F..
C2F0:  46 F0 00 00 E9 0D 00 A1  98 4E 99 01 46 FA 11 56   F....... .N..F..V
C300:  FC FF 46 F2 C4 5E 06 8B  46 F2 26 39 47 08 7F 03   ..F..^.. F.&9G...
C310:  E9 71 01 8B 46 FA 8B 56  FC 8E 06 9E 0D 26 03 06   .q..F..V .....&..
C320:  EE 77 83 D2 00 B9 0C 00  D3 E2 26 03 16 F0 77 8E   .w...... ..&...w.
C330:  C2 8B D8 26 80 3F 00 74  03 E9 2F 00 A1 98 4E 99   ...&.?.t ../...N.
C340:  8B 4E FA 8B 5E FC 2B C8  1B DA 89 4E F4 89 5E F6   .N..^.+. ...N..^.
C350:  8E 06 A0 0D 26 A1 04 00  89 46 F8 FF 4E F2 C7 46   ....&... .F..N..F
C360:  F0 01 00 C7 46 FE 06 00  E9 19 01 8E 06 A0 0D 26   ....F... .......&
C370:  A1 04 00 40 89 46 F8 8B  46 FA 8B 56 FC 05 01 00   ...@.F.. F..V....
```

```
C380:  83 D2 00 89 46 F4 89 56  F6 E9 0B 00 83 46 F4 01   ....F..V .....F..
C390:  83 56 F6 00 FF 46 F8 C4  5E 06 8B 46 F8 26 39 47   .V...F.. ^..F.&9G
C3A0:  04 7D 03 E9 44 00 8B 46  F4 8B 56 F6 8E 06 9E 0D   .}..D..F ..V.....
C3B0:  26 03 06 EE 77 83 D2 00  B9 0C 00 D3 E2 26 03 16   &...w... .....&..
C3C0:  F0 77 8E C2 8B D8 26 80  3F 00 74 03 E9 18 00 C7   .w....&. ?.t.....
C3D0:  46 F0 01 00 83 6E F4 01  83 5E F6 00 FF 4E F8 C7   F....n.. .^...N..
C3E0:  46 FE 00 00 E9 03 00 E9  A2 FF 83 7E F0 00 75 03   F....... ...~..u.
C3F0:  E9 03 00 E9 8E 00 8E 06  A0 0D 26 A1 04 00 48 89   ........ ..&...H.
C400:  46 F8 8B 46 FA 8B 56 FC  2D 01 00 83 DA 00 89 46   F..F..V. -......F
C410:  F4 89 56 F6 E9 0B 00 83  6E F4 01 83 5E F6 00 FF   ..V..... n...^...
C420:  4E F8 C4 5E 06 8B 46 F8  26 39 47 02 7E 03 E9 44   N..^..F. &9G.~..D
C430:  00 8B 46 F4 8B 56 F6 8E  06 9E 0D 26 03 06 EE 77   ..F..V.. ...&...w
C440:  83 D2 00 B9 0C 00 D3 E2  26 03 16 F0 77 8E C2 8B   ........ &...w...
C450:  D8 26 80 3F 00 74 03 E9  18 00 83 46 F4 01 83 56   .&.?.t.. ...F...V
C460:  F6 00 FF 46 F8 C7 46 F0  01 00 C7 46 FE 04 00 E9   ...F..F. ...F....
C470:  03 00 E9 A2 FF 83 7E F0  00 75 03 E9 03 00 E9 03   ......~. .u......
C480:  00 E9 73 FE E9 A4 01 8E  06 A0 0D 26 A1 04 00 89   ..s..... ...&....
C490:  46 F8 C7 46 F0 00 00 E9  0B 00 83 46 FA 01 83 56   F..F.... ...F...V
C4A0:  FC 00 FF 46 F8 C4 5E 06  8B 46 F8 26 39 47 04 7F   ...F..^. .F.&9G..
C4B0:  03 E9 77 01 8B 46 FA 8B  56 FC 8E 06 9E 0D 26 03   ..w..F.. V.....&.
C4C0:  06 EE 77 83 D2 00 B9 0C  00 D3 E2 26 03 16 F0 77   ..w..... ...&...w
C4D0:  8E C2 8B D8 26 80 3F 00  74 03 E9 2D 00 8B 46 FA   ....&.?. t..-..F.
C4E0:  8B 56 FC 2D 01 00 83 DA  00 89 46 F4 89 56 F6 8E   .V.-.... ..F..V..
C4F0:  06 A2 0D 26 A1 06 00 89  46 F2 FF 4E F8 C7 46 F0   ...&.... F..N..F.
C500:  01 00 C7 46 FE 00 00 E9  21 01 8E 06 A2 0D 26 A1   ...F.... !.....&.
C510:  06 00 40 89 46 F2 A1 98  4E 99 03 46 FA 13 56 FC   ..@.F... N..F..V.
C520:  89 46 F4 89 56 F6 E9 0D  00 A1 98 4E 99 01 46 F4   .F..V... ...N..F.
C530:  11 56 F6 FF 46 F2 C4 5E  06 8B 46 F2 26 39 47 08   .V..F..^ ..F.&9G.
C540:  7D 03 E9 46 00 8B 46 F4  8B 56 F6 8E 06 9E 0D 26   }..F..F. .V.....&
C550:  03 06 EE 77 83 D2 00 B9  0C 00 D3 E2 26 03 16 F0   ...w.... ....&...
C560:  77 8E C2 8B D8 26 80 3F  00 74 03 E9 1A 00 C7 46   w....&.? .t.....F
C570:  F0 01 00 A1 98 4E 99 29  46 F4 19 56 F6 FF 4E F2   .....N.) F..V..N.
C580:  C7 46 FE 06 00 E9 03 00  E9 9E FF 83 7E F0 00 75   .F...... ....~..u
C590:  03 E9 03 00 E9 94 00 8E  06 A2 0D 26 A1 06 00 48   ........ ...&...H
C5A0:  89 46 F2 A1 98 4E 99 8B  4E FA 8B 5E FC 2B C8 1B   .F...N.. N..^.+..
C5B0:  DA 89 4E F4 89 5E F6 E9  0D 00 A1 98 4E 99 29 46   ..N..^.. ....N.)F
C5C0:  F4 19 56 F6 FF 4E F2 C4  5E 06 8B 46 F2 26 39 47   ..V..N.. ^..F.&9G
C5D0:  06 7E 03 E9 46 00 8B 46  F4 8B 56 F6 8E 06 9E 0D   .~..F..F ..V.....
C5E0:  26 03 06 EE 77 83 D2 00  B9 0C 00 D3 E2 26 03 16   &...w... .....&..
C5F0:  F0 77 8E C2 8B D8 26 80  3F 00 74 03 E9 1A 00 A1   .w....&. ?.t.....
C600:  98 4E 99 01 46 F4 11 56  F6 FF 46 F2 C7 46 F0 01   .N..F..V ..F..F..
C610:  00 C7 46 FE 02 00 E9 03  00 E9 9E FF 83 7E F0 00   ..F..... .....~..
C620:  75 03 E9 03 00 E9 03 00  E9 6F FE 83 7E F0 00 75   u....... .o..~..u
C630:  03 E9 97 00 FF 76 FE 8B  46 0E 8B 56 10 05 04 00   .....v.. F..V....
C640:  52 50 8B 46 0A 8B 56 0C  05 04 00 52 50 FF 76 F6   RP.F..V. ...RP.v.
C650:  FF 76 F4 9A 43 18 BC 0B  83 C4 0E 3D 00 00 75 03   .v..C... ...=..u.
C660:  E9 68 00 C4 5E 0A 26 8B  5F 04 D1 E3 D1 E3 8B 87   .h..^.&. _.......
C670:  D2 06 03 46 F8 C4 5E 0A  26 89 07 C4 5E 0A 26 8B   ...F..^. &...^.&.
C680:  5F 04 D1 E3 D1 E3 8B 87  D0 06 03 46 F2 C4 5E 0A   _....... ...F..^.
C690:  26 89 47 02 C4 5E 0E 26  8B 5F 04 D1 E3 D1 E3 8B   &.G..^.& ._......
C6A0:  87 D2 06 03 46 F8 C4 5E  0E 26 89 07 C4 5E 0E 26   ....F..^ .&...^.&
C6B0:  8B 5F 04 D1 E3 D1 E3 8B  87 D0 06 03 46 F2 C4 5E   ._...... ....F..^
C6C0:  0E 26 89 47 02 B8 01 00  E9 06 00 B8 FF FF E9 00   .&.G.... ........
C6D0:  00 5E 5F 8B E5 5D CB 55  8B EC 81 EC 2E 00 57 56   .^_..].U ......WV
```

```
C6E0:  C4 5E 06 26 8B 07 C4 5E  0A 26 2B 07 89 46 E0 C4   .^.&...^ .&+..F..
C6F0:  5E 06 26 8B 47 02 C4 5E  0A 26 2B 47 02 89 46 DC   ^.&.G..^ .&+G..F.
C700:  C4 5E 06 26 8B 07 C4 5E  0A 26 3B 07 7F 03 E9 03   .^.&...^ .&;.....
C710:  00 26 8B 07 89 46 FE C4  5E 06 26 8B 07 C4 5E 0A   .&...F.. ^.&...^.
C720:  26 3B 07 7C 03 E9 03 00  26 8B 07 89 46 FC C4 5E   &;.|.... &...F..^
C730:  06 26 8B 47 02 C4 5E 0A  26 3B 47 02 7F 03 E9 04   .&.G..^. &;G.....
C740:  00 26 8B 47 02 89 46 E2  C4 5E 06 26 8B 47 02 C4   .&.G..F. .^.&.G..
C750:  5E 0A 26 3B 47 02 7C 03  E9 04 00 26 8B 47 02 89   ^.&;G.|. ...&.G..
C760:  46 DA FF 76 E0 FF 76 DC  9A CE 01 24 00 83 C4 04   F..v..v. ...$....
C770:  D1 E0 05 2D 00 B9 5A 00  99 F7 F9 89 46 DE 8B 46   ...-..Z. ....F..F
C780:  DE 05 06 00 B9 08 00 99  F7 F9 89 56 DE 8B 46 DE   ........ ...V..F.
C790:  C4 5E 06 26 2B 47 04 50  9A 04 2F AB 10 83 C4 02   .^.&+G.P ../.....
C7A0:  89 46 E4 B8 08 00 2B 46  E4 3B 46 E4 7E 03 E9 0C   .F....+F .;F.~...
C7B0:  00 B8 08 00 2B 46 E4 89  46 D6 E9 19 00 8B 46 DE   ....+F.. F.....F.
C7C0:  C4 5E 06 26 2B 47 04 50  9A 04 2F AB 10 83 C4 02   .^.&+G.P ../.....
C7D0:  89 46 E4 89 46 D6 83 7E  D6 02 7E 03 E9 52 00 8B   .F..F..~ ..~..R..
C7E0:  46 DE C4 5E 0A 26 2B 47  04 50 9A 04 2F AB 10 83   F..^.&+G .P../...
C7F0:  C4 02 89 46 E4 B8 08 00  2B 46 E4 3B 46 E4 7E 03   ...F.... +F.;F.~.
C800:  E9 0C 00 B8 08 00 2B 46  E4 89 46 D4 E9 19 00 8B   ......+F ..F.....
C810:  46 DE C4 5E 0A 26 2B 47  04 50 9A 04 2F AB 10 83   F..^.&+G .P../...
C820:  C4 02 89 46 E4 89 46 D4  83 7E D4 02 7F 03 E9 0F   ...F..F. .~......
C830:  00 B8 02 00 89 46 E6 89  46 FA 89 46 D8 89 46 E8   .....F.. F..F..F.
C840:  83 7E 12 00 74 03 E9 0D  00 C7 46 FA 04 00 C7 46   .~..t... ..F....F
C850:  E6 07 00 E9 12 01 C7 46  FA 03 00 FF 76 E0 9A 04   .......F ....v...
C860:  2F AB 10 83 C4 02 FF 76  DC 8B F0 9A 04 2F AB 10   /......v ...../..
C870:  83 C4 02 3B C6 7C 03 E9  0E 00 FF 76 E0 9A 04 2F   ...;.|.. ...v.../
C880:  AB 10 83 C4 02 E9 0B 00  FF 76 DC 9A 04 2F AB 10   ........ .v.../..
C890:  83 C4 02 3D 04 00 7C 03  E9 06 00 B8 04 00 E9 38   ...=..|. .......8
C8A0:  00 FF 76 E0 9A 04 2F AB  10 83 C4 02 FF 76 DC 8B   ..v.../. .....v..
C8B0:  F0 9A 04 2F AB 10 83 C4  02 3B C6 7C 03 E9 0E 00   .../.... .;.|....
C8C0:  FF 76 E0 9A 04 2F AB 10  83 C4 02 E9 0B 00 FF 76   .v.../.. .......v
C8D0:  DC 9A 04 2F AB 10 83 C4  02 3D 0A 00 7E 03 E9 81   .../.... .=..~...
C8E0:  00 FF 76 E0 9A 04 2F AB  10 83 C4 02 FF 76 DC 8B   ..v.../. .....v..
C8F0:  F0 9A 04 2F AB 10 83 C4  02 3B C6 7C 03 E9 0E 00   .../.... .;.|....
C900:  FF 76 E0 9A 04 2F AB 10  83 C4 02 E9 0B 00 FF 76   .v.../.. .......v
C910:  DC 9A 04 2F AB 10 83 C4  02 3D 04 00 7C 03 E9 06   .../.... .=..|...
C920:  00 B8 04 00 E9 38 00 FF  76 E0 9A 04 2F AB 10 83   .....8.. v.../...
C930:  C4 02 FF 76 DC 8B F0 9A  04 2F AB 10 83 C4 02 3B   ...v.... ./.....;
C940:  C6 7C 03 E9 0E 00 FF 76  E0 9A 04 2F AB 10 83 C4   .|.....v .../....
C950:  02 E9 0B 00 FF 76 DC 9A  04 2F AB 10 83 C4 02 E9   .....v.. ./......
C960:  03 00 B8 0A 00 89 46 E6  8D 46 D8 16 50 8D 46 E8   ......F. .F..P.F.
C970:  16 50 9A FC 35 BC 0B 83  C4 08 FF 76 E0 9A 04 2F   .P..5... ...v.../
C980:  AB 10 83 C4 02 3D 02 00  7C 03 E9 3A 00 FF 76 DC   .....=.. |..:..v.
C990:  9A 04 2F AB 10 83 C4 02  3D 02 00 7C 03 E9 27 00   ../..... =..|..'.
C9A0:  8B 46 FE 2B 46 FA 89 46  EC 8B 46 FA 03 46 FC 89   .F.+F..F ..F..F..
C9B0:  46 EE 8B 46 E2 2B 46 FA  89 46 F0 8B 46 FA 03 46   F..F.+F. .F..F..F
C9C0:  DA 89 46 F2 E9 3D 02 8B  46 E0 F7 D8 8B 4E DC D1   ..F..=.. F....N..
C9D0:  E1 D1 E1 3B C1 7E 03 E9  36 00 8B 46 DC D1 E0 D1   ...;.~.. 6..F....
C9E0:  E0 3B 46 E0 7E 03 E9 27  00 8B 46 FE 2B 46 D8 89   .;F.~..' ..F.+F..
C9F0:  46 EC 8B 46 D8 03 46 FC  89 46 EE 8B 46 E2 2B 46   F..F..F. .F..F.+F
CA00:  E8 89 46 F0 8B 46 E6 03  46 DA 89 46 F2 E9 F4 01   ..F..F.. F..F....
CA10:  8B 46 E0 F7 D8 8B 4E DC  D1 E1 D1 E1 3B C1 7F 03   .F....N. ....;...
CA20:  E9 38 00 8B 46 E0 D1 E0  D1 E0 F7 D8 3B 46 DC 7C   .8..F... ....;F.|
CA30:  03 E9 27 00 8B 46 FE 2B  46 E8 89 46 EC 8B 46 FA   ..'..F.+ F..F..F.
```

```
CA40:  03 46 FC 89 46 EE 8B 46  E2 2B 46 E8 89 46 F0 8B   .F..F..F .+F..F..
CA50:  46 FA 03 46 DA 89 46 F2  E9 A9 01 8B 46 E0 D1 E0   F..F..F. ....F...
CA60:  D1 E0 F7 D8 3B 46 DC 7D  03 E9 36 00 8B 46 E0 D1   ....;F.} ..6..F..
CA70:  E0 D1 E0 3B 46 DC 7D 03  E9 27 00 8B 46 FE 2B 46   ...;F.}. .'..F.+F
CA80:  E8 89 46 EC 8B 46 E6 03  46 FC 89 46 EE 8B 46 E2   ..F..F.. F..F..F.
CA90:  2B 46 D8 89 46 F0 8B 46  D8 03 46 DA 89 46 F2 E9   +F..F..F ..F..F..
CAA0:  62 01 8B 46 DC D1 E0 D1  E0 3B 46 E0 7C 03 E9 36   b..F.... .;F.|..6
CAB0:  00 8B 46 E0 D1 E0 D1 E0  3B 46 DC 7C 03 E9 27 00   ..F..... ;F.|..'.
CAC0:  8B 46 FE 2B 46 E8 89 46  EC 8B 46 FA 03 46 FC 89   .F.+F..F ..F..F..
CAD0:  46 EE 8B 46 E2 2B 46 FA  89 46 F0 8B 46 E8 03 46   F..F.+F. .F..F..F
CAE0:  DA 89 46 F2 E9 1D 01 8B  46 DC D1 E0 D1 E0 3B 46   ..F..... F.....;F
CAF0:  E0 7D 03 E9 3A 00 8B 46  E0 F7 D8 8B 4E DC D1 E1   .}..:..F ....N...
CB00:  D1 E1 3B C1 7D 03 E9 27  00 8B 46 FE 2B 46 D8 89   ..;.}..' ..F.+F..
CB10:  46 EC 8B 46 D8 03 46 FC  89 46 EE 8B 46 E2 2B 46   F..F..F. .F..F.+F
CB20:  E6 89 46 F0 8B 46 E8 03  46 DA 89 46 F2 E9 D4 00   ..F..F.. F..F....
CB30:  8B 46 E0 F7 D8 8B 4E DC  D1 E1 D1 E1 3B C1 7C 03   .F....N. ....;.|.
CB40:  E9 38 00 8B 46 E0 D1 E0  D1 E0 F7 D8 3B 46 DC 7F   .8..F... ....;F..
CB50:  03 E9 27 00 8B 46 FE 2B  46 FA 89 46 EC 8B 46 E8   ..'..F.+ F..F..F.
CB60:  03 46 FC 89 46 EE 8B 46  E2 2B 46 FA 89 46 F0 8B   .F..F..F .+F..F..
CB70:  46 E8 03 46 DA 89 46 F2  E9 89 00 8B 46 E0 D1 E0   F..F..F. ....F...
CB80:  D1 E0 F7 D8 3B 46 DC 7E  03 E9 36 00 8B 46 E0 D1   ....;F.~ ..6..F..
CB90:  E0 D1 E0 3B 46 DC 7E 03  E9 27 00 8B 46 FE 2B 46   ...;F.~. .'..F.+F
CBA0:  E6 89 46 EC 8B 46 E8 03  46 FC 89 46 EE 8B 46 E2   ..F..F.. F..F..F.
CBB0:  2B 46 D8 89 46 F0 8B 46  D8 03 46 DA 89 46 F2 E9   +F..F..F ..F..F..
CBC0:  42 00 8B 46 E0 D1 E0 D1  E0 3B 46 DC 7F 03 E9 33   B..F.... .;F....3
CBD0:  00 8B 46 DC D1 E0 D1 E0  3B 46 E0 7F 03 E9 24 00   ..F..... ;F....$.
CBE0:  8B 46 FE 2B 46 FA 89 46  EC 8B 46 E8 03 46 FC 89   .F.+F..F ..F..F..
CBF0:  46 EE 8B 46 E2 2B 46 E8  89 46 F0 8B 46 FA 03 46   F..F.+F. .F..F..F
CC00:  DA 89 46 F2 83 7E EC 03  7C 03 E9 05 00 C7 46 EC   ..F..~.. |.....F.
CC10:  03 00 A1 94 4E 2D 03 00  3B 46 EE 7C 03 E9 09 00   ....N-.. ;F.|....
CC20:  A1 94 4E 2D 03 00 89 46  EE 83 7E F0 00 7C 03 E9   ..N-...F ..~..|..
CC30:  05 00 C7 46 F0 03 00 A1  96 4E 2D 03 00 3B 46 F2   ...F.... .N-..;F.
CC40:  7C 03 E9 09 00 A1 96 4E  2D 03 00 89 46 F2 8B 46   |......N -...F..F
CC50:  EC 03 46 EE 99 2B C2 D1  F8 89 46 F4 8B 46 F0 03   ..F..+.. ..F..F..
CC60:  46 F2 99 2B C2 D1 F8 89  46 F6 8D 76 EA C4 7E 0E   F..+.... F..v..~.
CC70:  B9 08 00 F3 A5 B8 00 00  E9 00 00 5E 5F 8B E5 5D   ........ ...^_..]
CC80:  CB 55 8B EC 81 EC 18 00  57 56 83 7E 12 00 74 03   .U...... WV.~..t.
CC90:  E9 0D 00 C7 46 FE 04 00  C7 46 EA 07 00 E9 0A 00   ....F... .F......
CCA0:  C7 46 FE 03 00 C7 46 EA  04 00 8D 46 E8 16 50 8D   .F....F. ...F..P.
CCB0:  46 EC 16 50 9A FC 35 BC  0B 83 C4 08 C4 5E 0A 26   F..P..5. .....^.&
CCC0:  8B 07 C4 5E 06 26 39 07  7F 03 E9 C5 00 C4 5E 0A   ...^.&9. ......^.
CCD0:  26 8B 47 02 C4 5E 06 26  39 47 02 7F 03 E9 35 00   &.G..^.& 9G....5.
CCE0:  C4 5E 0A 26 8B 07 2B 46  FE 89 46 F0 C4 5E 0A 26   .^.&..+F ..F..^.&
CCF0:  8B 47 02 2B 46 EC 89 46  F4 C4 5E 06 26 8B 07 03   .G.+F..F ..^.&...
CD00:  46 EC 89 46 F2 C4 5E 06  26 8B 47 02 03 46 FE 89   F..F..^. &.G..F..
CD10:  46 F6 E9 7A 00 C4 5E 0A  26 8B 47 02 C4 5E 06 26   F..z..^. &.G..^.&
CD20:  39 47 02 7C 03 E9 35 00  C4 5E 0A 26 8B 07 2B 46   9G.|..5. .^.&..+F
CD30:  EC 89 46 F0 C4 5E 06 26  8B 47 02 2B 46 EC 89 46   ..F..^.& .G.+F..F
CD40:  F4 C4 5E 06 26 8B 07 03  46 FE 89 46 F2 C4 5E 0A   ..^.&... F..F..^.
CD50:  26 8B 47 02 03 46 FE 89  46 F6 E9 32 00 C4 5E 0A   &.G..F.. F..2..^.
CD60:  26 8B 07 2B 46 E8 89 46  F0 C4 5E 06 26 8B 47 02   &..+F..F ..^.&.G.
CD70:  2B 46 EC 89 46 F4 C4 5E  06 26 8B 07 03 46 E8 89   +F..F..^ .&...F..
CD80:  46 F2 C4 5E 06 26 8B 47  02 03 46 EA 89 46 F6 E9   F..^.&.G ..F..F..
CD90:  98 01 C4 5E 0A 26 8B 07  C4 5E 06 26 39 07 7C 03   ...^.&.. .^.&9.|.
```

```
CDA0:  E9 C5 00 C4 5E 0A 26 8B  47 02 C4 5E 06 26 39 47   ....^.&. G..^.&9G
CDB0:  02 7F 03 E9 35 00 C4 5E  06 26 8B 07 2B 46 FE 89   ....5..^ .&..+F..
CDC0:  46 F0 C4 5E 0A 26 8B 47  02 2B 46 FE 89 46 F4 C4   F..^.&.G .+F..F..
CDD0:  5E 0A 26 8B 07 03 46 EC  89 46 F2 C4 5E 06 26 8B   ^.&...F. .F..^.&.
CDE0:  47 02 03 46 EC 89 46 F6  E9 7A 00 C4 5E 0A 26 8B   G..F..F. .z..^.&.
CDF0:  47 02 C4 5E 06 26 39 47  02 7C 03 E9 35 00 C4 5E   G..^.&9G .|..5..^
CE00:  06 26 8B 07 2B 46 EC 89  46 F0 C4 5E 06 26 8B 47   .&..+F.. F..^.&.G
CE10:  02 2B 46 FE 89 46 F4 C4  5E 0A 26 8B 07 03 46 FE   .+F..F.. ^.&...F.
CE20:  89 46 F2 C4 5E 0A 26 8B  47 02 03 46 EC 89 46 F6   .F..^.&. G..F..F.
CE30:  E9 32 00 C4 5E 06 26 8B  07 2B 46 E8 89 46 F0 C4   .2..^.&. .+F..F..
CE40:  5E 06 26 8B 47 02 2B 46  EA 89 46 F4 C4 5E 0A 26   ^.&.G.+F ..F..^.&
CE50:  8B 07 03 46 E8 89 46 F2  C4 5E 06 26 8B 47 02 03   ...F..F. .^.&.G..
CE60:  46 EC 89 46 F6 E9 C2 00  C4 5E 0A 26 8B 47 02 C4   F..F.... .^.&.G..
CE70:  5E 06 26 39 47 02 7F 03  E9 35 00 C4 5E 06 26 8B   ^.&9G... .5..^.&.
CE80:  07 2B 46 EA 89 46 F0 C4  5E 0A 26 8B 47 02 2B 46   .+F..F.. ^.&.G.+F
CE90:  E8 89 46 F4 C4 5E 06 26  8B 07 03 46 EC 89 46 F2   ..F..^.& ...F..F.
CEA0:  C4 5E 06 26 8B 47 02 03  46 E8 89 46 F6 E9 7A 00   .^.&.G.. F..F..z.
CEB0:  C4 5E 0A 26 8B 47 02 C4  5E 06 26 39 47 02 7C 03   .^.&.G.. ^.&9G.|.
CEC0:  E9 35 00 C4 5E 06 26 8B  07 2B 46 EC 89 46 F0 C4   .5..^.&. .+F..F..
CED0:  5E 06 26 8B 47 02 2B 46  E8 89 46 F4 C4 5E 06 26   ^.&.G.+F ..F..^.&
CEE0:  8B 07 03 46 EA 89 46 F2  C4 5E 0A 26 8B 47 02 03   ...F..F. .^.&.G..
CEF0:  46 E8 89 46 F6 E9 32 00  C4 5E 06 26 8B 07 2B 46   F..F..2. .^.&..+F
CF00:  FE 89 46 F0 C4 5E 06 26  8B 47 02 2B 46 FE 89 46   ..F..^.& .G.+F..F
CF10:  F4 C4 5E 06 26 8B 07 03  46 FE 89 46 F2 C4 5E 06   ..^.&... F..F..^.
CF20:  26 8B 47 02 03 46 FE 89  46 F6 83 7E F0 03 7C 03   &.G..F.. F..~..|.
CF30:  E9 05 00 C7 46 F0 03 00  A1 94 4E 2D 03 00 3B 46   ....F... ..N-..;F
CF40:  F2 7C 03 E9 09 00 A1 94  4E 2D 03 00 89 46 F2 83   .|...... N-...F..
CF50:  7E F4 00 7C 03 E9 05 00  C7 46 F4 03 00 A1 96 4E   ~..|.... .F.....N
CF60:  2D 03 00 3B 46 F6 7C 03  E9 09 00 A1 96 4E 2D 03   -..;F.|. .....N-.
CF70:  00 89 46 F6 8B 46 F0 03  46 F2 99 2B C2 D1 F8 89   ..F..F.. F..+....
CF80:  46 F8 8B 46 F4 03 46 F6  99 2B C2 D1 F8 89 46 FA   F..F..F. .+....F.
CF90:  8D 76 EE C4 7E 0E B9 08  00 F3 A5 B8 00 00 E9 00   .v..~... ........
CFA0:  00 5E 5F 8B E5 5D CB 55  8B EC 81 EC 44 00 57 56   .^_..].U ....D.WV
CFB0:  C7 46 CC 00 00 8B 46 06  8B 56 08 1E 8D 7E E6 8B   .F....F. .V...~..
CFC0:  F0 16 07 8E DA B9 08 00  F3 A5 1F 8B 46 0A 8B 56   ........ ....F..V
CFD0:  0C 1E 8D 7E D0 8B F0 16  07 8E DA A5 A5 A5 1F 8B   ...~.... ........
CFE0:  46 0E 8B 56 10 1E 8D 7E  F6 8B F0 16 07 8E DA A5   F..V...~ ........
CFF0:  A5 A5 1F C7 46 FC 01 00  C7 06 92 4E 00 00 83 7E   ....F... ...N...~
D000:  16 00 75 03 E9 08 00 C7  46 CE 01 00 E9 05 00 C7   ..u..... F.......
D010:  46 CE 00 00 83 7E 16 00  75 03 E9 12 00 8D 7E D6   F....~.. u.....~.
D020:  8D 76 E6 8C D0 8E C0 B9  08 00 F3 A5 E9 3C 00 B8   .v...... .....<..
D030:  00 00 50 8D 4E D6 16 51  8D 56 F6 16 52 8D 56 D0   ..P.N..Q .V..R.V.
D040:  16 52 9A 17 09 BC 0B 83  C4 0E 83 7E 14 00 7C 03   .R...... ...~..|.
D050:  E9 18 00 8D 46 D6 16 50  8D 46 E6 16 50 FF 76 12   ....F..P .F..P.v.
D060:  9A DD 27 D0 01 83 C4 0A  89 46 14 8B 46 DA 2B 46   ..'..... .F..F.+F
D070:  D8 3D 1E 00 7E 03 E9 0E  00 8B 46 DE 2B 46 DC 3D   .=..~... ..F.+F.=
D080:  1E 00 7F 03 E9 1F 00 FF  76 DE FF 76 DC FF 76 DA   ........ v..v..v.
D090:  FF 76 D8 B8 FA 06 1E 50  9A 82 3B BC 0B 83 C4 0C   .v.....P ..;.....
D0A0:  B8 00 00 E9 1C 02 83 7E  16 00 74 03 E9 3B 00 8D   .......~ ..t..;..
D0B0:  46 CC 16 50 B8 01 00 50  8D 46 14 16 50 8D 46 12   F..P...P .F..P.F.
D0C0:  16 50 8D 46 F6 16 50 8D  46 D0 16 50 8D 46 D6 16   .P.F..P. F..P.F..
D0D0:  50 9A DC 2A D0 01 83 C4  1A 89 46 C8 3D 00 00 7C   P..*.... ..F.=..|
D0E0:  03 E9 06 00 B8 00 00 E9  D8 01 8D 46 F6 16 50 8D   ........ ...F..P.
D0F0:  46 D0 16 50 8D 46 D6 16  50 9A 89 23 BC 0B 83 C4   F..P.F.. P..#....
```

```
D100:  0C 89 46 C8 8B 46 C8 E9  98 01 8D 46 C2 16 50 8D   ..F..F.. ...F..P.
D110:  46 BC 16 50 8D 46 F6 16  50 8D 46 D0 16 50 8D 46   F..P.F.. P.F..P.F
D120:  D6 16 50 9A 75 2E BC 0B  83 C4 14 89 46 CA 83 7E   ..P.u... ....F..~
D130:  CA 00 74 03 E9 09 00 C7  06 92 4E 00 00 E9 B9 00   ..t..... ..N.....
D140:  83 3E 92 4E 01 7D 03 E9  AB 00 C7 06 92 4E 00 00   .>.N.}.. .....N..
D150:  83 7E CE 00 74 03 E9 06  00 B8 00 00 E9 63 01 83   .~..t... .....c..
D160:  3E 9C 4E 0A 74 03 E9 1F  00 FF 76 DE FF 76 DC FF   >.N.t... ..v..v..
D170:  76 DA FF 76 D8 B8 2F 07  1E 50 9A 82 3B BC 0B 83   v..v../. .P..;...
D180:  C4 0C B8 00 00 E9 3A 01  C7 06 F8 06 00 00 FF 06   ......:. ........
D190:  9C 4E B8 00 00 50 B9 FF  FF 51 FF 76 12 8D 56 BC   .N...P.. .Q.v..V.
D1A0:  16 52 8D 56 D0 16 52 8D  56 D6 16 52 9A E7 11 BC   .R.V..R. V..R....
D1B0:  0B 83 C4 12 89 46 FE FF  0E 9C 4E C7 06 F8 06 00   .....F.. ..N.....
D1C0:  00 C7 46 CE 00 00 83 7E  FE 00 75 03 E9 09 00 83   ..F....~ ..u.....
D1D0:  7E FE FF 74 03 E9 17 00  8D 7E D0 8D 76 C2 8C D0   ~..t.... .~..v...
D1E0:  8E C0 A5 A5 A5 C7 46 FC  00 00 C7 46 14 FF FF E9   ......F. ...F....
D1F0:  CD 00 E9 04 00 FF 06 92  4E C7 46 16 00 00 8D 7E   ........ N.F....~
D200:  E6 8D 76 D6 8C D0 8E C0  B9 08 00 F3 A5 83 3E 92   ..v..... ......>.
D210:  4E 00 74 03 E9 1E 00 B8  00 00 50 8D 46 D6 16 50   N.t..... ..P.F..P
D220:  8D 46 F6 16 50 8D 46 D0  16 50 9A 17 09 BC 0B 83   .F..P.F. .P......
D230:  C4 0E E9 25 00 8B 46 C4  03 46 BE 99 2B C2 D1 F8   ...%..F. .F..+...
D240:  50 8B 46 C2 03 46 BC 99  2B C2 D1 F8 50 8D 46 D6   P.F..F.. +...P.F.
D250:  16 50 9A 42 19 BC 0B 83  C4 08 83 7E 14 00 7C 03   .P.B.... ...~..|.
D260:  E9 18 00 8D 46 D6 16 50  8D 46 E6 16 50 FF 76 12   ....F..P .F..P.v.
D270:  9A DD 27 D0 01 83 C4 0A  89 46 14 E9 41 00 83 7E   ..'..... .F..A..~
D280:  FC 00 75 03 E9 09 00 B8  FE FF E9 35 00 E9 06 00   ..u..... ...5....
D290:  B8 FF FF E9 2C 00 E9 26  00 B8 00 00 E9 23 00 E9   ....,..& .....#..
D2A0:  1D 00 2D FD FF 75 03 E9  D4 FF 48 7D 03 E9 0F 00   ..-..u.. ..H}....
D2B0:  48 7F 03 E9 E3 FF 48 75  03 E9 4E FE E9 00 00 E9   H.....Hu ..N.....
D2C0:  A9 FD 5E 5F 8B E5 5D CB  55 8B EC 81 EC 34 00 57   ..^_..]. U....4.W
D2D0:  56 9A A8 02 96 07 8E 06  9A 0D 26 A1 E6 00 48 A3   V....... ..&...H.
D2E0:  94 4E 8E 06 9C 0D 26 A1  E8 00 48 A3 96 4E A1 94   .N....&. ..H..N..
D2F0:  4E 40 A3 98 4E A1 96 4E  40 A3 9A 4E 9A 50 01 C9   N@..N..N @..N.P..
D300:  04 C7 46 DE 00 00 E9 03  00 FF 46 DE 83 7E DE 08   ..F..... ..F..~..
D310:  7C 03 E9 26 00 8B 5E DE  D1 E3 D1 E3 8B 87 D0 06   |..&..^. ........
D320:  F7 2E 98 4E 8B 5E DE D1  E3 D1 E3 03 87 D2 06 8B   ...N.^.. ........
D330:  5E DE D1 E3 89 87 82 4E  E9 CE FF C7 46 DE 01 00   ^......N ....F...
D340:  A1 98 4E 40 99 89 46 F4  89 56 F6 E9 0B 00 FF 46   ..N@..F. .V.....F
D350:  DE 83 46 F4 02 83 56 F6  00 8B 46 DE 39 06 96 4E   ..F...V. ..F.9..N
D360:  7F 03 E9 92 02 C6 46 F8  00 C7 46 DA 01 00 E9 0B   ......F. ..F.....
D370:  00 FF 46 DA 83 46 F4 01  83 56 F6 00 8B 46 DA 39   ..F..F.. .V...F.9
D380:  06 94 4E 7F 03 E9 6C 02  80 7E F8 00 74 03 E9 3A   ..N...l. .~..t..:
D390:  02 8B 46 F4 8B 56 F6 8E  06 9E 0D 26 03 06 EE 77   ..F..V.. ...&...w
D3A0:  83 D2 00 B9 0C 00 D3 E2  26 03 16 F0 77 8E C2 8B   ........ &...w...
D3B0:  D8 26 8A 07 88 46 F8 80  7E F8 FF 74 03 E9 08 02   .&...F.. ~..t....
D3C0:  B8 04 00 50 8D 46 FE 16  50 8D 46 D8 16 50 FF 76   ...P.F.. P.F..P.v
D3D0:  F6 FF 76 F4 9A 43 18 BC  0B 83 C4 0E 3D 00 00 75   ..v..C.. ....=..u
D3E0:  03 E9 E4 01 A1 98 4E 99  8B 4E F4 8B 5E F6 2B C8   ......N. .N..^.+.
D3F0:  1B DA 83 E9 01 83 DB 00  89 4E F0 89 5E F2 8B 46   ........ .N..^..F
D400:  F0 8B 56 F2 83 46 F0 01  83 56 F2 00 8E 06 9E 0D   ..V..F.. .V......
D410:  26 03 06 EE 77 83 D2 00  B9 0C 00 D3 E2 26 03 16   &...w... .....&..
D420:  F0 77 8E C2 8B D8 26 80  3F 00 74 03 E9 99 01 8B   .w....&. ?.t.....
D430:  46 F0 8B 56 F2 83 46 F0  01 83 56 F2 00 8E 06 9E   F..V..F. ..V.....
D440:  0D 26 03 06 EE 77 83 D2  00 B9 0C 00 D3 E2 26 03   .&...w.. ......&.
D450:  16 F0 77 8E C2 8B D8 26  80 3F 00 74 03 E9 68 01   ..w....& .?.t..h.
```

```
D460:  8B 46 F0 8B 56 F2 8E 06  9E 0D 26 03 06 EE 77 83   .F..V... ..&...w.
D470:  D2 00 B9 0C 00 D3 E2 26  03 16 F0 77 8E C2 8B D8   .......& ...w....
D480:  26 80 3F 00 74 03 E9 3F  01 8B 46 DA 2B 06 F6 06   &.?.t..? ..F.+...
D490:  3D 00 00 7C 03 E9 03 00  B8 00 00 89 46 E2 A1 F6   =..|.... ....F...
D4A0:  06 03 46 DA 3B 06 94 4E  7F 03 E9 03 00 A1 94 4E   ..F.;..N .......N
D4B0:  89 46 E4 8B 46 DE 2B 06  F6 06 3D 00 00 7C 03 E9   .F..F.+. ..=..|..
D4C0:  03 00 B8 00 00 89 46 E6  A1 F6 06 03 46 DE 3B 06   ......F. ....F.;.
D4D0:  96 4E 7F 03 E9 03 00 A1  96 4E 89 46 E8 8B 46 E2   .N...... .N.F..F.
D4E0:  03 46 E4 99 2B C2 D1 F8  89 46 EA 8B 46 E6 03 46   .F..+... .F..F..F
D4F0:  E8 99 2B C2 D1 F8 89 46  EC FF 76 EC FF 76 EA 9A   ..+....F ..v..v..
D500:  04 05 96 07 83 C4 04 89  46 DC 83 7E DC 00 7C 03   ........ F..~..|.
D510:  E9 06 00 B8 FB FF E9 E4  00 8B 5E D8 D1 E3 D1 E3   ........ ..^.....
D520:  8B 87 D2 06 03 46 DA 89  46 D4 8B 5E D8 D1 E3 D1   .....F.. F..^....
D530:  E3 8B 87 D0 06 03 46 DE  89 46 D6 8B 5E FE D1 E3   ......F. .F..^...
D540:  D1 E3 8B 87 D2 06 03 46  DA 89 46 FA 8B 5E FE D1   .......F ..F..^..
D550:  E3 D1 E3 8B 87 D0 06 03  46 DE 89 46 FC C7 06 9C   ........ F..F....
D560:  4E 00 00 C7 06 F8 06 00  00 8B 46 F4 8B 56 F6 8E   N....... ..F..V..
D570:  06 9E 0D 26 03 06 EE 77  83 D2 00 B9 0C 00 D3 E2   ...&...w ........
D580:  26 03 16 F0 77 8E C2 8B  D8 26 C6 07 7F FF 76 DC   &...w... .&....v.
D590:  8D 46 FA 16 50 8D 46 D4  16 50 8D 46 E0 16 50 9A   .F..P.F. .P.F..P.
D5A0:  C6 1A BC 0B 83 C4 0E 3D  FB FF 74 03 E9 06 00 B8   .......= ..t.....
D5B0:  FB FF E9 48 00 9A 05 0A  96 07 3D 00 00 7C 03 E9   ...H.... ..=..|..
D5C0:  06 00 B8 FA FF E9 35 00  E9 26 00 8B 46 F4 8B 56   ......5. .&..F..V
D5D0:  F6 8E 06 9E 0D 26 03 06  EE 77 83 D2 00 B9 0C 00   .....&.. .w......
D5E0:  D3 E2 26 03 16 F0 77 8E  C2 8B D8 26 8A 07 88 46   ..&...w. ...&...F
D5F0:  F8 E9 7D FD E9 57 FD B8  00 00 E9 00 00 5E 5F 8B   ..}..W.. .....^_.
D600:  E5 5D CB 55 8B EC 81 EC  02 00 57 56 8B 46 12 05   .].U.... ..WV.F..
D610:  07 00 89 46 FE E9 03 00  FF 4E FE 8B 46 12 39 46   ...F.... .N..F.9F
D620:  FE 7F 03 E9 48 00 8A 46  FE 25 07 00 C4 5E 0A 26   ....H..F .%...^.&
D630:  89 07 C4 5E 0A 26 8B 1F  D1 E3 8B 87 82 4E 99 03   ...^.&.. .....N..
D640:  46 06 13 56 08 8E 06 9E  0D 26 03 06 EE 77 83 D2   F..V.... .&...w..
D650:  00 B9 0C 00 D3 E2 26 03  16 F0 77 8E C2 8B D8 26   ......&. ..w....&
D660:  80 3F 00 75 03 E9 03 00  E9 03 00 E9 AA FF 8B 46   .?.u.... .......F
D670:  12 39 46 FE 74 03 E9 06  00 B8 00 00 E9 7D 00 8B   .9F.t... .....}..
D680:  46 12 40 89 46 FE E9 03  00 FF 46 FE 8B 46 12 05   F.@.F... ..F..F..
D690:  08 00 3B 46 FE 7F 03 E9  48 00 8A 46 FE 25 07 00   ..;F.... H..F.%..
D6A0:  C4 5E 0E 26 89 07 C4 5E  0E 26 8B 1F D1 E3 8B 87   .^.&...^ .&......
D6B0:  82 4E 99 03 46 06 13 56  08 8E 06 9E 0D 26 03 06   .N..F..V .....&..
D6C0:  EE 77 83 D2 00 B9 0C 00  D3 E2 26 03 16 F0 77 8E   .w...... ..&...w.
D6D0:  C2 8B D8 26 80 3F 00 75  03 E9 03 00 E9 03 00 E9   ...&.?.u ........
D6E0:  A7 FF 8B 46 12 2B 46 FE  3D F8 FF 74 03 E9 06 00   ...F.+F. =..t....
D6F0:  B8 00 00 E9 06 00 B8 01  00 E9 00 00 5E 5F 8B E5   ........ ....^_..
D700:  5D CB 55 8B EC 81 EC 10  00 57 56 B8 02 00 89 46   ].U..... .WV....F
D710:  FA 89 46 F6 89 46 F8 89  46 FC C4 5E 06 26 8B 47   ..F..F.. F..^.&.G
D720:  0A 89 46 F4 C4 5E 06 26  8B 47 0C 89 46 F2 C4 5E   ..F..^.& .G..F..^
D730:  06 26 8B 47 02 C4 5E 06  26 2B 47 04 05 1E 00 99   .&.G..^. &+G.....
D740:  2B C2 D1 F8 3D 04 00 7F  03 E9 03 00 B8 04 00 89   +...=... ........
D750:  46 F0 C4 5E 06 26 8B 47  06 C4 5E 06 26 2B 47 08   F..^.&.G ..^.&+G.
D760:  05 1E 00 99 2B C2 D1 F8  3D 04 00 7F 03 E9 03 00   ....+... =.......
D770:  B8 04 00 89 46 FE 8B 46  0A 39 46 F4 7E 03 E9 06   ....F..F .9F.~...
D780:  00 8B 46 F0 89 46 F8 8B  46 0A 39 46 F4 7D 03 E9   ..F..F.. F.9F.}..
D790:  06 00 8B 46 F0 89 46 FC  8B 46 0C 39 46 F2 7D 03   ...F..F. .F.9F.}.
D7A0:  E9 06 00 8B 46 FE 89 46  F6 8B 46 0C 39 46 F2 7E   ....F..F ..F.9F.~
D7B0:  03 E9 06 00 8B 46 FE 89  46 FA 8B 46 FC C4 5E 06   .....F.. F..F..^.
```

```
D7C0:  26 29 47 02 8B 46 F8 C4  5E 06 26 01 47 04 8B 46   &)G..F.. ^.&.G..F
D7D0:  F6 C4 5E 06 26 29 47 06  8B 46 FA C4 5E 06 26 01   ..^.&)G. .F..^.&.
D7E0:  47 08 C4 5E 06 26 83 7F  02 03 7C 03 E9 09 00 C4   G..^.&.. ..|.....
D7F0:  5E 06 26 C7 47 02 03 00  C4 5E 06 A1 94 4E 2D 03   ^.&.G... .^...N-.
D800:  00 26 39 47 04 7F 03 E9  0D 00 A1 94 4E 2D 03 00   .&9G.... ....N-..
D810:  C4 5E 06 26 89 47 04 C4  5E 06 26 83 7F 06 00 7C   .^.&.G.. ^.&....|
D820:  03 E9 09 00 C4 5E 06 26  C7 47 06 03 00 C4 5E 06   .....^.& .G....^.
D830:  A1 96 4E 2D 03 00 26 39  47 08 7F 03 E9 0D 00 A1   ..N-..&9 G.......
D840:  96 4E 2D 03 00 C4 5E 06  26 89 47 08 C4 5E 06 26   .N-...^. &.G..^.&
D850:  8B 47 02 C4 5E 06 26 03  47 04 99 2B C2 D1 F8 C4   .G..^.&. G..+....
D860:  5E 06 26 89 47 0A C4 5E  06 26 8B 47 06 C4 5E 06   ^.&.G..^ .&.G..^.
D870:  26 03 47 08 99 2B C2 D1  F8 C4 5E 06 26 89 47 0C   &.G..+.. ..^.&.G.
D880:  5E 5F 8B E5 5D CB 55 8B  EC 81 EC 64 00 57 56 C7   ^_..].U. ...d.WV.
D890:  46 D6 02 00 8B 46 06 8B  56 08 1E 8D 7E C6 8B F0   F....F.. V...~...
D8A0:  16 07 8E DA B9 08 00 F3  A5 1F 8B 46 0A 8B 56 0C   ........ ...F..V.
D8B0:  1E 8D 7E B0 8B F0 16 07  8E DA A5 A5 A5 1F 8B 46   ..~..... .......F
D8C0:  0E 8B 56 10 1E 8D 7E D8  8B F0 16 07 8E DA A5 A5   ..V...~. ........
D8D0:  A5 1F C7 46 E2 00 00 C7  06 92 4E 00 00 C7 46 DE   ...F.... ..N...F.
D8E0:  01 00 C7 46 AA 00 00 FF  76 D2 FF 76 D0 9A F7 32   ...F.... v..v...2
D8F0:  BC 0B 83 C4 04 C7 46 FE  FF FF 8D 46 FE 16 50 16   ......F. ...F..P.
D900:  50 8D 46 D8 16 50 8D 4E  B0 16 51 9A 4F 37 BC 0B   P.F..P.N ..Q.O7..
D910:  83 C4 10 8D 7E B6 8D 76  C6 8C D0 8E C0 B9 08 00   ....~..v ........
D920:  F3 A5 B8 01 00 50 8D 46  B6 16 50 8D 46 D8 16 50   .....P.F ..P.F..P
D930:  8D 46 B0 16 50 9A 17 09  BC 0B 83 C4 0E 8B 46 BA   .F..P... ......F.
D940:  2B 46 B8 3B 06 D4 07 7E  03 E9 0F 00 8B 46 BE 2B   +F.;...~ .....F.+
D950:  46 BC 3B 06 D4 07 7F 03  E9 1E 00 C7 46 AA FF FF   F.;..... ....F...
D960:  FF 76 BE FF 76 BC FF 76  BA FF 76 B8 B8 6B 07 1E   .v..v..v ..v..k..
D970:  50 9A 82 3B BC 0B 83 C4  0C 83 3E 9C 4E 0A 74 03   P..;.... ..>.N.t.
D980:  E9 1E 00 C7 46 AA FF FF  FF 76 BE FF 76 BC FF 76   ....F... .v..v..v
D990:  BA FF 76 B8 B8 9C 07 1E  50 9A 82 3B BC 0B 83 C4   ..v..... P..;....
D9A0:  0C 83 7E AA FF 75 03 E9  1A 00 8D 46 D8 16 50 8D   ..~..u.. ...F..P.
D9B0:  46 B0 16 50 8D 46 B6 16  50 9A 89 23 BC 0B 83 C4   F..P.F.. P..#....
D9C0:  0C 89 46 AA 8B 46 AA E9  90 02 B8 00 00 50 FF 76   ..F..F.. .....P.v
D9D0:  DE FF 76 12 8D 4E C0 16  51 8D 4E D0 16 51 9A 3D   ..v..N.. Q.N..Q.=
D9E0:  33 BC 0B 83 C4 0E 01 46  E2 8D 46 A4 16 50 8D 46   3......F ..F..P.F
D9F0:  9E 16 50 8D 46 D8 16 50  8D 46 B0 16 50 8D 46 B6   ..P.F..P .F..P.F.
DA00:  16 50 9A 75 2E BC 0B 83  C4 14 89 46 AE 83 7E AE   .P.u.... ...F..~.
DA10:  00 74 03 E9 09 00 C7 06  92 4E 00 00 E9 0D 01 83   .t...... .N......
DA20:  3E 92 4E 01 7C 03 E9 07  00 FF 06 92 4E E9 FC 00   >.N.|... ....N...
DA30:  FF 76 AA FF 76 DE FF 76  E2 FF 76 12 FF 76 C2 FF   .v..v..v ..v..v..
DA40:  76 C0 9A 38 0B 96 07 83  C4 0C 89 46 9C 83 7E 9C   v..8.... ...F..~.
DA50:  00 7C 03 E9 06 00 B8 FB  FF E9 1E 02 8B 46 9C 89   .|...... .....F..
DA60:  46 12 8D 7E E4 BE 9E 4E  8C D0 8E C0 B9 0D 00 F3   F..~...N ........
DA70:  A5 C7 06 F8 06 00 00 FF  06 9C 4E FF 76 12 8D 46   ........ ..N.v..F
DA80:  9E 16 50 8D 46 B0 16 50  8D 46 B6 16 50 9A C6 1A   ..P.F..P .F..P...
DA90:  BC 0B 83 C4 0E 89 46 E0  FF 0E 9C 4E 83 7E E0 FB   ......F. ...N.~..
DAA0:  74 03 E9 06 00 B8 FB FF  E9 CF 01 C7 06 F8 06 00   t....... ........
DAB0:  00 C7 06 92 4E 00 00 83  7E E0 FD 74 03 E9 05 00   ....N... ~..t....
DAC0:  C7 46 E0 00 00 83 7E E0  00 74 03 E9 2B 00 8D 7E   .F....~. .t..+..~
DAD0:  B0 8D 76 A4 8C D0 8E C0  A5 A5 A5 C7 46 E2 00 00   ..v..... ....F...
DAE0:  C7 46 DE 00 00 FF 76 C2  FF 76 C0 9A F7 32 BC 0B   .F....v. .v...2..
DAF0:  83 C4 04 E9 81 01 E9 33  00 BF 9E 4E 8D 76 E4 8C   .......3 ...N.v..
DB00:  D8 8E C0 B9 0D 00 F3 A5  83 7E E0 FE 74 03 E9 11   ........ .~..t...
DB10:  00 FF 76 12 9A A9 07 96  07 83 C4 02 89 46 12 E9   ..v..... .....F..
```

```
DB20:  0A 00 C7 46 DE 00 00 C7  46 E2 00 00 B8 00 00 50   ...F.... F......P
DB30:  9A 32 35 BC 0B 83 C4 02  B9 2D 00 99 F7 F9 89 46   .25..... .-.....F
DB40:  FE 8D 46 FE 16 50 16 50  8D 46 D8 16 50 8D 4E B0   ..F..P.P .F..P.N.
DB50:  16 51 9A 4F 37 BC 0B 83  C4 10 8D 7E C6 8D 76 B6   .Q.O7... ...~..v.
DB60:  8C D0 8E C0 B9 08 00 F3  A5 83 3E 92 4E 00 74 03   ........ ..>.N.t.
DB70:  E9 1E 00 B8 01 00 50 8D  46 B6 16 50 8D 46 D8 16   ......P. F..P.F..
DB80:  50 8D 46 B0 16 50 9A 17  09 BC 0B 83 C4 0E E9 25   P.F..P.. .......%
DB90:  00 8B 46 A6 03 46 A0 99  2B C2 D1 F8 50 8B 46 A4   ..F..F.. +...P.F.
DBA0:  03 46 9E 99 2B C2 D1 F8  50 8D 46 B6 16 50 9A 42   .F..+... P.F..P.B
DBB0:  19 BC 0B 83 C4 08 E9 BE  00 83 7E DE 00 75 03 E9   ........ ..~..u..
DBC0:  08 00 C7 46 AC FE FF E9  36 00 FF 76 12 9A 3D 0C   ...F.... 6..v..=.
DBD0:  96 07 83 C4 02 3D 00 00  75 03 E9 13 00 FF 76 12   .....=.. u.....v.
DBE0:  9A A9 07 96 07 83 C4 02  C7 46 AC 00 00 E9 10 00   ........ .F......
DBF0:  FF 76 12 9A A9 07 96 07  83 C4 02 C7 46 AC FF FF   .v...... ....F...
DC00:  8B 46 AC E9 74 00 B8 FF  FF 50 FF 76 DE FF 76 12   .F..t... .P.v..v.
DC10:  8D 4E C0 16 51 8D 56 D0  16 52 9A 3D 33 BC 0B 83   .N..Q.V. .R.=3...
DC20:  C4 0E 01 46 E2 FF 76 AA  FF 76 DE FF 76 E2 FF 76   ...F..v. .v..v..v
DC30:  12 FF 76 C2 FF 76 C0 9A  38 0B 96 07 83 C4 0C 83   ..v..v.. 8.......
DC40:  7E AA FF 74 03 E9 09 00  B8 00 00 E9 2C 00 E9 06   ~..t.... ....,...
DC50:  00 B8 FD FF E9 23 00 E9  1D 00 2D FD FF 75 03 E9   .....#.. ..-..u..
DC60:  57 FF 48 7D 03 E9 0F 00  48 7F 03 E9 98 FF 48 75   W.H}.... H.....Hu
DC70:  03 E9 56 FD E9 00 00 E9  C3 FC 5E 5F 8B E5 5D CB   ..V..... ..^_..].
DC80:  55 8B EC 81 EC 64 00 57  56 C7 46 D6 02 00 8B 46   U....d.W V.F....F
DC90:  06 8B 56 08 1E 8D 7E C6  8B F0 16 07 8E DA B9 08   ..V...~. ........
DCA0:  00 F3 A5 1F 8B 46 0A 8B  56 0C 1E 8D 7E B0 8B F0   .....F.. V...~...
DCB0:  16 07 8E DA A5 A5 A5 1F  8B 46 0E 8B 56 10 1E 8D   ........ .F..V...
DCC0:  7E D8 8B F0 16 07 8E DA  A5 A5 A5 1F C7 46 E2 00   ~....... .....F..
DCD0:  00 C7 06 92 4E 00 00 C7  46 DE 01 00 C7 46 AA 00   ....N... F....F..
DCE0:  00 FF 76 D2 FF 76 D0 9A  F7 32 BC 0B 83 C4 04 C7   ..v..v.. .2......
DCF0:  46 FE FF FF 8D 46 FE 16  50 16 50 8D 46 D8 16 50   F....F.. P.P.F..P
DD00:  8D 4E B0 16 51 9A 4F 37  BC 0B 83 C4 10 8D 7E B6   .N..Q.O7 ......~.
DD10:  8D 76 C6 8C D0 8E C0 B9  08 00 F3 A5 B8 01 00 50   .v...... .......P
DD20:  8D 46 B6 16 50 8D 46 D8  16 50 8D 46 B0 16 50 9A   .F..P.F. .P.F..P.
DD30:  17 09 BC 0B 83 C4 0E 8B  46 BA 2B 46 B8 3D 1E 00   ........ F.+F.=..
DD40:  7E 03 E9 0E 00 8B 46 BE  2B 46 BC 3D 1E 00 7F 03   ~.....F. +F.=....
DD50:  E9 1E 00 C7 46 AA FF FF  FF 76 BE FF 76 BC FF 76   ....F... .v..v..v
DD60:  BA FF 76 B8 B8 D6 07 1E  50 9A 82 3B BC 0B 83 C4   ..v..... P..;....
DD70:  0C 83 3E 9C 4E 0A 74 03  E9 1E 00 C7 46 AA FF FF   ..>.N.t. ....F...
DD80:  FF 76 BE FF 76 BC FF 76  BA FF 76 B8 B8 07 08 1E   .v..v..v ..v.....
DD90:  50 9A 82 3B BC 0B 83 C4  0C 8D 46 A4 16 50 8D 46   P..;.... ..F..P.F
DDA0:  9E 16 50 8D 46 D8 16 50  8D 46 B0 16 50 8D 46 B6   ..P.F..P .F..P.F.
DDB0:  16 50 9A DB 22 BC 0B 83  C4 14 89 46 AA 8B 46 AA   .P.."... ...F..F.
DDC0:  E9 AE 02 B8 00 00 50 FF  76 DE FF 76 12 8D 4E C0   ......P. v..v..N.
DDD0:  16 51 8D 4E D0 16 51 9A  3D 33 BC 0B 83 C4 0E 01   .Q.N..Q. =3......
DDE0:  46 E2 C7 06 92 4E 00 00  8D 7E C6 8D 76 B6 8C D0   F....N.. .~..v...
DDF0:  8E C0 B9 08 00 F3 A5 B8  00 00 50 9A 32 35 BC 0B   ........ ..P.25..
DE00:  83 C4 02 B9 2D 00 99 F7  F9 89 46 FE 8D 46 FE 16   ....-... ..F..F..
DE10:  50 16 50 8D 46 D8 16 50  8D 4E B0 16 51 9A 4F 37   P.P.F..P .N..Q.O7
DE20:  BC 0B 83 C4 10 B8 01 00  50 8D 46 B6 16 50 8D 46   ........ P.F..P.F
DE30:  D8 16 50 8D 46 B0 16 50  9A 17 09 BC 0B 83 C4 0E   ..P.F..P ........
DE40:  E9 4F 02 B8 00 00 50 FF  76 DE FF 76 12 8D 46 C0   .O....P. v..v..F.
DE50:  16 50 8D 46 D0 16 50 9A  3D 33 BC 0B 83 C4 0E 01   .P.F..P. =3......
DE60:  46 E2 83 3E 92 4E 01 7C  03 E9 2C 00 FF 06 92 4E   F..>.N.| ..,....N
DE70:  8B 46 A6 03 46 A0 99 2B  C2 D1 F8 50 8B 46 A4 03   .F..F..+ ...P.F..
```

```
DE80:  46 9E 99 2B C2 D1 F8 50  8D 46 B6 16 50 9A 42 19   F..+...P .F..P.B.
DE90:  BC 0B 83 C4 08 E9 47 01  B8 00 00 50 FF 76 DE FF   ......G. ...P.v..
DEA0:  76 E2 FF 76 12 FF 76 C2  FF 76 C0 9A 38 0B 96 07   v..v..v. .v..8...
DEB0:  83 C4 0C 89 46 9C 83 7E  9C 00 7C 03 E9 06 00 B8   ....F..~ ..|.....
DEC0:  FB FF E9 D0 01 8B 46 9C  89 46 12 8D 7E E4 BE 9E   ......F. .F..~...
DED0:  4E 8C D0 8E C0 B9 0D 00  F3 A5 C7 06 F8 06 00 00   N....... ........
DEE0:  FF 06 9C 4E FF 76 12 8D  46 9E 16 50 8D 46 B0 16   ...N.v.. F..P.F..
DEF0:  50 8D 46 B6 16 50 9A C6  1A BC 0B 83 C4 0E 89 46   P.F..P.. .......F
DF00:  E0 FF 0E 9C 4E 83 7E E0  FB 74 03 E9 06 00 B8 FB   ....N.~. .t......
DF10:  FF E9 81 01 C7 06 F8 06  00 00 C7 06 92 4E 00 00   ........ .....N..
DF20:  83 7E E0 00 74 03 E9 2B  00 8D 7E B0 8D 76 A4 8C   .~..t..+ ..~..v..
DF30:  D0 8E C0 A5 A5 A5 C7 46  E2 00 00 C7 46 DE 00 00   .......F ....F...
DF40:  FF 76 C2 FF 76 C0 9A F7  32 BC 0B 83 C4 04 E9 41   .v..v... 2......A
DF50:  01 E9 33 00 BF 9E 4E 8D  76 E4 8C D8 8E C0 B9 0D   ..3...N. v.......
DF60:  00 F3 A5 83 7E E0 FE 74  03 E9 11 00 FF 76 12 9A   ....~..t .....v..
DF70:  A9 07 96 07 83 C4 02 89  46 12 E9 0A 00 C7 46 DE   ........ F.....F.
DF80:  00 00 C7 46 E2 00 00 8D  7E C6 8D 76 B6 8C D0 8E   ...F.... ~..v....
DF90:  C0 B9 08 00 F3 A5 B8 00  00 50 9A 32 35 BC 0B 83   ........ .P.25...
DFA0:  C4 02 B9 2D 00 99 F7 F9  89 46 FE 8D 46 FE 16 50   ...-.... .F..F..P
DFB0:  16 50 8D 46 D8 16 50 8D  4E B0 16 51 9A 4F 37 BC   .P.F..P. N..Q.O7.
DFC0:  0B 83 C4 10 B8 01 00 50  8D 46 B6 16 50 8D 46 D8   .......P .F..P.F.
DFD0:  16 50 8D 46 B0 16 50 9A  17 09 BC 0B 83 C4 0E E9   .P.F..P. ........
DFE0:  B0 00 83 7E DE 00 75 03  E9 08 00 C7 46 AC FE FF   ...~..u. ....F...
DFF0:  E9 36 00 FF 76 12 9A 3D  0C 96 07 83 C4 02 3D 00   .6..v..= ......=.
E000:  00 75 03 E9 13 00 FF 76  12 9A A9 07 96 07 83 C4   .u.....v ........
E010:  02 C7 46 AC 00 00 E9 10  00 FF 76 12 9A A9 07 96   ..F..... ..v.....
E020:  07 83 C4 02 C7 46 AC FF  FF 8B 46 AC E9 66 00 B8   .....F.. ..F..f..
E030:  FF FF 50 FF 76 DE FF 76  12 8D 46 C0 16 50 8D 4E   ..P.v..v ..F..P.N
E040:  D0 16 51 9A 3D 33 BC 0B  83 C4 0E 01 46 E2 FF 76   ..Q.=3.. ....F..v
E050:  AA FF 76 DE FF 76 E2 FF  76 12 FF 76 C2 FF 76 C0   ..v..v.. v..v..v.
E060:  9A 38 0B 96 07 83 C4 0C  B8 00 00 E9 27 00 E9 21   .8...... ....'..!
E070:  00 2D FA FF 3D 06 00 76  03 E9 16 00 D1 E0 93 2E   .-..=..v ........
E080:  FF A7 C4 22 03 20 03 20  83 20 22 22 6F 22 6F 22   ...". .  . ""o"o"
E090:  03 20 E9 A2 FC 5E 5F 8B  E5 5D CB 55 8B EC 81 EC   . ...^_. .].U....
E0A0:  04 00 57 56 FF 76 10 FF  76 0E FF 76 0C FF 76 0A   ..WV.v.. v..v..v.
E0B0:  FF 76 08 FF 76 06 9A 89  23 BC 0B 83 C4 0C 89 46   .v..v... #......F
E0C0:  FE 83 7E FE 00 74 03 E9  73 00 FF 76 18 FF 76 16   ..~..t.. s..v..v.
E0D0:  FF 76 14 FF 76 12 FF 76  10 FF 76 0E FF 76 0C FF   .v..v..v ..v..v..
E0E0:  76 0A FF 76 08 FF 76 06  9A 90 29 BC 0B 83 C4 14   v..v..v. ..).....
E0F0:  89 46 FC 8B 46 FC E9 2D  00 8B 46 16 8B 56 18 1E   .F..F..- ..F..V..
E100:  8B F0 8E DA C4 7E 0A A5  A5 A5 1F E9 29 00 8B 46   .....~.. ....)..F
E110:  12 8B 56 14 1E 8B F0 8E  DA C4 7E 0E A5 A5 A5 1F   ..V..... ..~.....
E120:  E9 14 00 E9 11 00 2D FA  FF 75 03 E9 E0 FF 48 75   ......-. .u....Hu
E130:  03 E9 C5 FF E9 00 00 8B  46 FC E9 06 00 8B 46 FE   ........ F.....F.
E140:  E9 00 00 5E 5F 8B E5 5D  CB 55 8B EC 81 EC 12 08   ...^_..] .U......
E150:  57 56 C7 46 DC 00 00 C7  46 FA 00 00 C7 46 DE 00   WV.F.... F....F..
E160:  00 C7 86 02 F8 01 00 C7  46 E8 00 00 C4 5E 06 26   ........ F....^.&
E170:  8B 47 02 89 86 EE F7 C4  5E 06 26 8B 47 04 89 46   .G...... ^.&.G..F
E180:  FC C4 5E 06 26 8B 47 06  89 46 FE C4 5E 06 26 8B   ..^.&.G. .F..^.&.
E190:  47 08 89 46 F8 C7 46 D8  00 00 E9 03 00 FF 46 D8   G..F..F. ......F.
E1A0:  83 7E D8 01 7E 03 E9 03  03 8B 76 D8 D1 E6 C7 42   .~..~... ..v....B
E1B0:  EE 00 00 83 7E D8 00 74  03 E9 17 00 8B 46 0A 8B   ....~..t .....F..
E1C0:  56 0C 1E 8D 7E E0 8B F0  16 07 8E DA A5 A5 A5 1F   V...~... ........
E1D0:  E9 14 00 8B 46 0E 8B 56  10 1E 8D 7E E0 8B F0 16   ....F..V ...~....
```

```
E1E0:  07 8E DA A5 A5 A5 1F 8B  46 E0 89 86 00 F8 89 46   ........ F......F
E1F0:  E6 8B 46 E2 89 86 F6 F7  89 46 DA C7 86 F8 F7 00   ..F..... .F......
E200:  00 8B 46 E0 99 8B C8 8B  46 E2 8B DA F7 2E 98 4E   ..F..... F......N
E210:  03 C8 13 DA 89 4E D4 89  5E D6 8B 46 D4 8B 56 D6   .....N.. ^..F..V.
E220:  8E 06 9E 0D 26 03 06 EE  77 83 D2 00 B9 0C 00 D3   ....&... w.......
E230:  E2 26 03 16 F0 77 8E C2  8B D8 26 80 3F 7F 74 03   .&...w.. ..&.?.t.
E240:  E9 0D 00 8B 76 D8 D1 E6  C7 42 EE 01 00 E9 54 00   ....v... .B....T.
E250:  C7 86 02 F8 00 00 8B 46  D4 8B 56 D6 8E 06 9E 0D   .......F ..V.....
E260:  26 03 06 EE 77 83 D2 00  B9 0C 00 D3 E2 26 03 16   &...w... .....&..
E270:  F0 77 8E C2 8B D8 26 C6  07 FA 8B 46 D4 8B 56 D6   .w....&. ...F..V.
E280:  8B 76 DE D1 E6 D1 E6 89  82 04 F8 89 92 06 F8 FF   .v...... ........
E290:  46 DE 81 7E DE F4 01 7D  03 E9 08 00 C7 46 E8 01   F..~...} .....F..
E2A0:  00 E9 9D 01 83 7E D8 00  74 03 E9 A7 00 C4 5E 0E   .....~.. t.....^.
E2B0:  8B 86 F6 F7 26 39 47 02  74 03 E9 97 00 C4 5E 0E   ....&9G. t.....^.
E2C0:  8B 86 00 F8 26 39 07 74  03 E9 88 00 8D 7E F2 8D   ....&9.t .....~..
E2D0:  76 E0 8C D0 8E C0 A5 A5  A5 FF 76 D8 8D 46 F2 16   v....... ..v..F..
E2E0:  50 FF 76 D6 FF 76 D4 9A  D3 30 BC 0B 83 C4 0A 3D   P.v..v.. .0.....=
E2F0:  00 00 75 03 E9 5D 00 8B  46 F6 C4 5E 0E 26 2B 47   ..u..].. F..^.&+G
E300:  04 50 9A 04 2F AB 10 83  C4 02 3D 04 00 74 03 E9   .P../... ..=..t..
E310:  42 00 83 7E DE 00 7F 03  E9 33 00 FF 4E DE 8B 76   B..~.... .3..N..v
E320:  DE D1 E6 D1 E6 8B 82 04  F8 8B 92 06 F8 8E 06 9E   ........ ........
E330:  0D 26 03 06 EE 77 83 D2  00 B9 0C 00 D3 E2 26 03   .&...w.. ......&.
E340:  16 F0 77 8E C2 8B D8 26  C6 07 7F E9 C4 FF B8 FF   ..w....& ........
E350:  FF E9 F7 01 8B 46 D8 E9  22 00 8D BE FA F7 8D 76   .....F.. "......v
E360:  E0 8C D0 8E C0 A5 A5 A5  E9 21 00 8D BE F0 F7 8D   ........ .!......
E370:  76 E0 8C D0 8E C0 A5 A5  A5 E9 10 00 0B C0 75 03   v....... ......u.
E380:  E9 D7 FF 48 75 03 E9 E2  FF E9 00 00 8B 46 D4 8B   ...Hu... .....F..
E390:  56 D6 89 46 EA 89 56 EC  FF 76 D8 8D 46 E0 16 50   V..F..V. .v..F..P
E3A0:  FF 76 D6 FF 76 D4 9A D3  30 BC 0B 83 C4 0A 3D 00   .v..v... 0.....=.
E3B0:  00 74 03 E9 08 00 C7 46  DC 01 00 E9 83 00 8B 46   .t.....F .......F
E3C0:  E0 89 86 00 F8 8B 46 E2  89 86 F6 F7 8B 5E E4 D1   ......F. .....^..
E3D0:  E3 8B 87 82 4E 99 01 46  D4 11 56 D6 8B 86 F6 F7   ....N..F ..V.....
E3E0:  39 46 F8 7D 03 E9 25 00  8B 86 F6 F7 39 46 FE 7E   9F.}..%. ....9F.~
E3F0:  03 E9 19 00 8B 86 00 F8  39 86 EE F7 7E 03 E9 0C   ........ 9...~...
E400:  00 8B 86 00 F8 39 46 FC  7C 03 E9 03 00 E9 31 00   .....9F. |.....1.
E410:  8B 86 F6 F7 39 46 DA 74  03 E9 22 00 8B 86 00 F8   ....9F.t ..".....
E420:  39 46 E6 74 03 E9 16 00  FF 86 F8 F7 83 BE F8 F7   9F.t.... ........
E430:  02 7F 03 E9 08 00 C7 46  FA 01 00 E9 03 00 E9 D9   .......F ........
E440:  FD 83 7E DC 00 75 03 E9  03 00 E9 5F 00 83 7E E8   ..~..u.. ..._..~.
E450:  00 75 03 E9 03 00 E9 53  00 8B 46 EA 8B 56 EC 8E   .u.....S ..F..V..
E460:  06 9E 0D 26 03 06 EE 77  83 D2 00 B9 0C 00 D3 E2   ...&...w ........
E470:  26 03 16 F0 77 8E C2 8B  D8 26 80 3F FA 74 03 E9   &...w... .&.?.t..
E480:  27 00 8B 46 EA 8B 56 EC  8E 06 9E 0D 26 03 06 EE   '..F..V. ....&...
E490:  77 83 D2 00 B9 0C 00 D3  E2 26 03 16 F0 77 8E C2   w....... .&...w..
E4A0:  8B D8 26 C6 07 FF FF 4E  DE E9 F1 FC 83 7E DE 00   ..&....N .....~..
E4B0:  7F 03 E9 33 00 FF 4E DE  8B 76 DE D1 E6 D1 E6 8B   ...3..N. .v......
E4C0:  82 04 F8 8B 92 06 F8 8E  06 9E 0D 26 03 06 EE 77   ........ ...&...w
E4D0:  83 D2 00 B9 0C 00 D3 E2  26 03 16 F0 77 8E C2 8B   ........ &...w...
E4E0:  D8 26 C6 07 7F E9 C4 FF  8D B6 FA F7 C4 7E 0A A5   .&...... .....~..
E4F0:  A5 A5 8D B6 F0 F7 C4 7E  0E A5 A5 A5 83 BE 02 F8   .......~ ........
E500:  00 74 03 E9 09 00 83 7E  E8 00 75 03 E9 06 00 B8   .t.....~ ..u.....
E510:  FF FF E9 36 00 83 7E FA  00 75 03 E9 06 00 B8 FD   ...6..~. .u......
E520:  FF E9 27 00 83 7E DC 00  74 03 E9 12 00 83 7E EE   ..'..~.. t.....~.
E530:  00 75 03 E9 0F 00 83 7E  F0 00 75 03 E9 06 00 B8   .u.....~ ..u.....
```

```
E540:  FE FF E9 06 00 B8 00 00  E9 00 00 5E 5F 8B E5 5D   ........ ...^_..]
E550:  CB 55 8B EC 81 EC 0C 00  57 56 C7 46 FA 00 00 C7   .U...... WV.F....
E560:  46 FE FF FF C4 5E 0E 26  8B 47 02 89 46 F4 C4 5E   F....^.& .G..F..^
E570:  0E 26 8B 07 89 46 FC 83  7E FA 04 7E 03 E9 C4 01   .&...F.. ~..~....
E580:  C4 5E 0A 8B 46 FC 26 39  47 02 74 03 E9 24 00 C4   .^..F.&9 G.t..$..
E590:  5E 0A 8B 46 F4 26 39 47  06 7C 03 E9 15 00 8B 46   ^..F.&9G .|.....F
E5A0:  F4 C4 5E 0A 26 2B 47 06  89 46 F8 C7 46 FE 02 00   ..^.&+G. .F..F...
E5B0:  E9 96 00 C4 5E 0A 8B 46  F4 26 39 47 06 74 03 E9   ....^..F .&9G.t..
E5C0:  24 00 C4 5E 0A 8B 46 FC  26 39 47 04 7F 03 E9 15   $..^..F. &9G.....
E5D0:  00 C4 5E 0A 26 8B 47 04  2B 46 FC 89 46 F8 C7 46   ..^.&.G. +F..F..F
E5E0:  FE 00 00 E9 63 00 C4 5E  0A 8B 46 FC 26 39 47 04   ....c..^ ..F.&9G.
E5F0:  74 03 E9 24 00 C4 5E 0A  8B 46 F4 26 39 47 08 7F   t..$..^. .F.&9G..
E600:  03 E9 15 00 C4 5E 0A 26  8B 47 08 2B 46 F4 89 46   .....^.& .G.+F..F
E610:  F8 C7 46 FE 06 00 E9 30  00 C4 5E 0A 8B 46 F4 26   ..F....0 ..^..F.&
E620:  39 47 08 74 03 E9 21 00  C4 5E 0A 8B 46 FC 26 39   9G.t..!. .^..F.&9
E630:  47 02 7C 03 E9 12 00 8B  46 FC C4 5E 0A 26 2B 47   G.|..... F..^.&+G
E640:  02 89 46 F8 C7 46 FE 04  00 83 7E FE FF 74 03 E9   ..F..F.. ..~..t..
E650:  06 00 B8 00 00 E9 F2 00  FF 46 FA C7 46 F6 01 00   ........ .F..F...
E660:  E9 03 00 FF 46 F6 8B 46  F6 39 46 F8 7D 03 E9 D0   ....F..F .9F.}...
E670:  00 8B 5E FE D1 E3 D1 E3  8B 87 D0 06 01 46 F4 8B   ..^..... .....F..
E680:  5E FE D1 E3 D1 E3 8B 87  D2 06 01 46 FC C4 5E 12   ^....... ...F..^.
E690:  8B 46 F4 26 39 47 02 74  03 E9 14 00 C4 5E 12 8B   .F.&9G.t .....^..
E6A0:  46 FC 26 39 07 74 03 E9  06 00 B8 00 00 E9 9A 00   F.&9.t.. ........
E6B0:  8B 5E FE D1 E3 8B 87 82  4E 99 C4 5E 06 26 01 07   .^...... N..^.&..
E6C0:  26 11 57 02 C4 5E 06 26  8B 07 26 8B 57 02 8E 06   &.W..^.& ..&.W...
E6D0:  9E 0D 26 03 06 EE 77 83  D2 00 B9 0C 00 D3 E2 26   ..&...w. .......&
E6E0:  03 16 F0 77 8E C2 8B D8  26 80 3F 00 74 03 E9 4D   ...w.... &.?.t..M
E6F0:  00 8B 5E FE D1 E3 8B 87  82 4E 99 C4 5E 06 26 29   ..^..... .N..^.&)
E700:  07 26 19 57 02 8B 46 F4  8B 5E FE D1 E3 D1 E3 2B   .&.W..F. .^.....+
E710:  87 D0 06 C4 5E 0E 26 89  47 02 8B 46 FC 8B 5E FE   ....^.&. G..F..^.
E720:  D1 E3 D1 E3 2B 87 D2 06  C4 5E 0E 26 89 07 8B 46   ....+... .^.&...F
E730:  FE C4 5E 0E 26 89 47 04  B8 01 00 E9 0C 00 E9 22   ..^.&.G. ......."
E740:  FF E9 33 FE B8 00 00 E9  00 00 5E 5F 8B E5 5D CB   ..3..... ..^_..].
E750:  55 8B EC 81 EC EE 07 57  56 C7 86 1E F8 01 00 8B   U......W V.......
E760:  46 0A 8B 56 0C 1E 8D 7E  FA 8B F0 16 07 8E DA A5   F..V...~ ........
E770:  A5 A5 1F C4 5E 0E 8B 46  FC 26 39 47 02 74 03 E9   ....^..F .&9G.t..
E780:  14 00 C4 5E 0E 8B 46 FA  26 39 07 74 03 E9 06 00   ...^..F. &9.t....
E790:  B8 00 00 E9 FD 03 8B 46  FA 99 8B C8 8B 46 FC 8B   .......F .....F..
E7A0:  DA F7 2E 98 4E 03 C8 13  DA 89 4E F2 89 5E F4 FF   ....N... ..N..^..
E7B0:  76 10 FF 76 0E 8D 46 FA  16 50 FF 76 08 FF 76 06   v..v..F. .P.v..v.
E7C0:  8D 46 F2 16 50 9A 91 27  BC 0B 83 C4 10 3D 00 00   .F..P..' .....=..
E7D0:  74 03 E9 06 00 B8 00 00  E9 B8 03 8D 76 FA C4 7E   t....... ....v..~
E7E0:  12 A5 A5 A5 8D 76 FA C4  7E 16 A5 A5 A5 8B 46 F2   .....v.. ~.....F.
E7F0:  8B 56 F4 8E 06 9E 0D 26  03 06 EE 77 83 D2 00 B9   .V.....& ...w....
E800:  0C 00 D3 E2 26 03 16 F0  77 8E C2 8B D8 26 8A 07   ....&... w....&..
E810:  88 86 1C F8 8A 46 FE 2C  02 25 07 00 89 46 FE 8B   .....F., .%...F..
E820:  46 F2 8B 56 F4 8E 06 9E  0D 26 03 06 EE 77 83 D2   F..V.... .&...w..
E830:  00 B9 0C 00 D3 E2 26 03  16 F0 77 8E C2 8B D8 26   ......&. ..w....&
E840:  80 3F 7F 75 03 E9 06 00  C7 86 1E F8 00 00 B8 00   .?.u.... ........
E850:  00 50 8D 4E FA 16 51 FF  76 F4 FF 76 F2 9A D3 30   .P.N..Q. v..v...0
E860:  BC 0B 83 C4 0A 8A 46 FE  2C FC 25 07 00 C4 5E 12   ......F. ,.%...^.
E870:  26 89 47 04 C7 46 F8 00  00 C4 5E 06 8B 46 FC 26   &.G..F.. ..^..F.&
E880:  39 47 06 7E 03 E9 00 01  C4 5E 06 8B 46 FC 26 39   9G.~.... .^..F.&9
E890:  47 08 7D 03 E9 F1 00 C4  5E 06 8B 46 FA 26 39 47   G.}..... ^..F.&9G
```

```
E8A0:  02 7E 03 E9 E2 00 C4 5E  06 8B 46 FA 26 39 47 04   .~.....^ ..F.&9G.
E8B0:  7D 03 E9 D3 00 8B 5E FE  D1 E3 8B 87 82 4E 99 01   }.....^. .....N..
E8C0:  46 F2 11 56 F4 8B 46 F2  8B 56 F4 8E 06 9E 0D 26   F..V..F. .V.....&
E8D0:  03 06 EE 77 83 D2 00 B9  0C 00 D3 E2 26 03 16 F0   ...w.... ....&...
E8E0:  77 8E C2 8B D8 26 80 3F  7F 75 03 E9 06 00 C7 86   w....&.? .u......
E8F0:  1E F8 00 00 8D 76 FA C4  7E 16 A5 A5 A5 8B 46 F2   .....v.. ~.....F.
E900:  8B 56 F4 8E 06 9E 0D 26  03 06 EE 77 83 D2 00 B9   .V.....& ...w....
E910:  0C 00 D3 E2 26 03 16 F0  77 8E C2 8B D8 26 8A 07   ....&... w....&..
E920:  88 86 1C F8 8B 46 F2 8B  56 F4 8E 06 9E 0D 26 03   .....F.. V.....&.
E930:  06 EE 77 83 D2 00 B9 0C  00 D3 E2 26 03 16 F0 77   ..w..... ...&...w
E940:  8E C2 8B D8 26 C6 07 FA  8B 46 F2 8B 56 F4 8B 76   ....&... .F..V..v
E950:  F8 D1 E6 D1 E6 89 82 20  F8 89 92 22 F8 FF 46 F8   ........ ..."..F.
E960:  B8 00 00 50 8D 4E FA 16  51 FF 76 F4 FF 76 F2 9A   ...P.N.. Q.v..v..
E970:  D3 30 BC 0B 83 C4 0A 3D  00 00 74 03 E9 06 00 B8   .0.....= ..t.....
E980:  00 00 E9 0E 02 E9 F1 FE  FF 4E F8 80 BE 1C F8 7F   ........ .N......
E990:  75 03 E9 24 00 8B 46 F2  8B 56 F4 8E 06 9E 0D 26   u..$..F. .V.....&
E9A0:  03 06 EE 77 83 D2 00 B9  0C 00 D3 E2 26 03 16 F0   ...w.... ....&...
E9B0:  77 8E C2 8B D8 26 C6 07  FF C7 46 F0 00 00 83 BE   w....&.. ..F.....
E9C0:  1E F8 00 74 03 E9 44 01  C7 46 F6 00 00 E9 03 00   ...t..D. .F......
E9D0:  FF 46 F6 83 7E F6 01 7E  03 E9 30 01 83 7E F6 00   .F..~..~ ..0..~..
E9E0:  74 03 E9 09 00 8B 46 0A  8B 56 0C E9 06 00 8B 46   t.....F. .V.....F
E9F0:  0E 8B 56 10 89 86 12 F8  89 96 14 F8 8B 86 12 F8   ..V..... ........
EA00:  8B 96 14 F8 1E 8D 7E FA  8B F0 16 07 8E DA A5 A5   ......~. ........
EA10:  A5 1F 83 7E F6 01 1B C0  F7 D8 89 86 16 F8 8B 46   ...~.... .......F
EA20:  FE 05 04 00 B9 08 00 99  F7 F9 89 56 FE 8B 46 FA   ........ ...V..F.
EA30:  99 8B C8 8B 46 FC 8B DA  F7 2E 98 4E 03 C8 13 DA   ....F... ...N....
EA40:  89 4E F2 89 5E F4 FF B6  16 F8 8D 46 FA 16 50 FF   .N..^... ...F..P.
EA50:  76 F4 FF 76 F2 9A D3 30  BC 0B 83 C4 0A 3D 00 00   v..v...0 .....=..
EA60:  75 03 E9 98 00 C4 5E 06  8B 46 FA 26 39 47 02 7E   u.....^. .F.&9G.~
EA70:  03 E9 89 00 C4 5E 06 8B  46 FA 26 39 47 04 7D 03   .....^.. F.&9G.}.
EA80:  E9 7A 00 C4 5E 06 8B 46  FC 26 39 47 06 7E 03 E9   .z..^..F .&9G.~..
EA90:  6B 00 C4 5E 06 8B 46 FC  26 39 47 08 7D 03 E9 5C   k..^..F. &9G.}..\
EAA0:  00 8B 5E FE D1 E3 8B 87  82 4E 99 01 46 F2 11 56   ..^..... .N..F..V
EAB0:  F4 8B 46 F2 8B 56 F4 8E  06 9E 0D 26 03 06 EE 77   ..F..V.. ...&...w
EAC0:  83 D2 00 B9 0C 00 D3 E2  26 03 16 F0 77 8E C2 8B   ........ &...w...
EAD0:  D8 26 80 3F FA 74 03 E9  20 00 83 7E F6 01 1B C0   .&.?.t.. ...~....
EAE0:  25 01 00 05 FA FF 89 46  F0 8B 46 F2 8B 56 F4 89   %......F ..F..V..
EAF0:  86 18 F8 89 96 1A F8 E9  03 00 E9 49 FF 83 7E F0   ........ ...I..~.
EB00:  00 75 03 E9 03 00 E9 03  00 E9 C4 FE 83 7E F8 00   .u...... ......~.
EB10:  7F 03 E9 33 00 FF 4E F8  8B 76 F8 D1 E6 D1 E6 8B   ...3..N. .v......
EB20:  82 20 F8 8B 92 22 F8 8E  06 9E 0D 26 03 06 EE 77   . ...".. ...&...w
EB30:  83 D2 00 B9 0C 00 D3 E2  26 03 16 F0 77 8E C2 8B   ........ &...w...
EB40:  D8 26 C6 07 7F E9 C4 FF  83 7E F0 00 75 03 E9 2C   .&...... .~..u..,
EB50:  00 8B 86 18 F8 8B 96 1A  F8 8E 06 9E 0D 26 03 06   ........ .....&..
EB60:  EE 77 83 D2 00 B9 0C 00  D3 E2 26 03 16 F0 77 8E   .w...... ..&...w.
EB70:  C2 8B D8 26 C6 07 00 8B  46 F0 E9 16 00 83 BE 1E   ...&.... F.......
EB80:  F8 00 75 03 E9 06 00 B8  00 00 E9 06 00 B8 FC FF   ..u..... ........
EB90:  E9 00 00 5E 5F 8B E5 5D  CB 55 8B EC 81 EC 02 00   ...^_..] .U......
EBA0:  57 56 FF 76 18 FF 76 16  FF 76 14 FF 76 12 FF 76   WV.v..v. .v..v..v
EBB0:  10 FF 76 0E FF 76 0C FF  76 0A FF 76 08 FF 76 06   ..v..v.. v..v..v.
EBC0:  9A 90 29 BC 0B 83 C4 14  89 46 FE 8B 46 FE E9 3F   ..)..... .F..F..?
EBD0:  00 B8 00 00 E9 58 00 B8  01 00 E9 52 00 8B 46 16   .....X.. ...R..F.
EBE0:  8B 56 18 1E 8B F0 8E DA  C4 7E 0A A5 A5 A5 1F B8   .V...... .~......
EBF0:  00 00 E9 3A 00 8B 46 12  8B 56 14 1E 8B F0 8E DA   ...:..F. .V......
```

```
EC00:  C4 7E 0E A5 A5 A5 1F B8  00 00 E9 22 00 E9 1F 00   .~...... ..."....
EC10:  2D FA FF 75 03 E9 DD FF  48 75 03 E9 BF FF 48 75   -..u.... Hu....Hu
EC20:  03 E9 B3 FF 2D 04 00 75  03 E9 A5 FF E9 00 00 5E   ....-..u .......^
EC30:  5F 8B E5 5D CB 55 8B EC  81 EC 0E 00 57 56 C7 46   _..].U.. ....WV.F
EC40:  F4 01 00 8B 46 0A 8B 56  0C 1E 8D 7E FA 8B F0 16   ....F..V ...~....
EC50:  07 8E DA A5 A5 A5 1F C4  5E 0E 8B 46 FC 26 39 47   ........ ^..F.&9G
EC60:  02 74 03 E9 14 00 C4 5E  0E 8B 46 FA 26 39 07 74   .t.....^ ..F.&9.t
EC70:  03 E9 06 00 B8 00 00 E9  13 02 8B 46 FA 99 8B C8   ........ ...F....
EC80:  8B 46 FC 8B DA F7 2E 98  4E 03 C8 13 DA 89 4E F6   .F...... N.....N.
EC90:  89 5E F8 FF 76 10 FF 76  0E 8D 46 FA 16 50 FF 76   .^..v..v ..F..P.v
ECA0:  08 FF 76 06 8D 46 F6 16  50 9A 91 27 BC 0B 83 C4   ..v..F.. P..'....
ECB0:  10 3D 00 00 74 03 E9 06  00 B8 00 00 E9 CE 01 8D   .=..t... ........
ECC0:  76 FA C4 7E 12 A5 A5 A5  8D 76 FA C4 7E 16 A5 A5   v..~.... .v..~...
ECD0:  A5 8B 46 F6 8B 56 F8 8E  06 9E 0D 26 03 06 EE 77   ..F..V.. ...&...w
ECE0:  83 D2 00 B9 0C 00 D3 E2  26 03 16 F0 77 8E C2 8B   ........ &...w...
ECF0:  D8 26 8A 07 88 46 F2 8A  46 FE 2C 02 25 07 00 89   .&...F.. F.,.%...
ED00:  46 FE 8B 46 F6 8B 56 F8  8E 06 9E 0D 26 03 06 EE   F..F..V. ....&...
ED10:  77 83 D2 00 B9 0C 00 D3  E2 26 03 16 F0 77 8E C2   w....... .&...w..
ED20:  8B D8 26 80 3F 7F 75 03  E9 05 00 C7 46 F4 00 00   ..&.?.u. ....F...
ED30:  B8 00 00 50 8D 46 FA 16  50 FF 76 F8 FF 76 F6 9A   ...P.F.. P.v..v..
ED40:  D3 30 BC 0B 83 C4 0A 8A  46 FE 2C FC 25 07 00 C4   .0...... F.,.%...
ED50:  5E 12 26 89 47 04 C4 5E  06 8B 46 FC 26 39 47 06   ^.&.G..^ ..F.&9G.
ED60:  7E 03 E9 E6 00 C4 5E 06  8B 46 FC 26 39 47 08 7D   ~.....^. .F.&9G.}
ED70:  03 E9 D7 00 C4 5E 06 8B  46 FA 26 39 47 02 7E 03   .....^.. F.&9G.~.
ED80:  E9 C8 00 C4 5E 06 8B 46  FA 26 39 47 04 7D 03 E9   ....^..F .&9G.}..
ED90:  B9 00 8B 5E FE D1 E3 8B  87 82 4E 99 01 46 F6 11   ...^.... ..N..F..
EDA0:  56 F8 8B 46 F6 8B 56 F8  8E 06 9E 0D 26 03 06 EE   V..F..V. ....&...
EDB0:  77 83 D2 00 B9 0C 00 D3  E2 26 03 16 F0 77 8E C2   w....... .&...w..
EDC0:  8B D8 26 80 3F 7F 75 03  E9 05 00 C7 46 F4 00 00   ..&.?.u. ....F...
EDD0:  8D 76 FA C4 7E 16 A5 A5  A5 8B 46 F6 8B 56 F8 8E   .v..~... ..F..V..
EDE0:  06 9E 0D 26 03 06 EE 77  83 D2 00 B9 0C 00 D3 E2   ...&...w ........
EDF0:  26 03 16 F0 77 8E C2 8B  D8 26 8A 07 88 46 F2 8B   &...w... .&...F..
EE00:  46 F6 8B 56 F8 8E 06 9E  0D 26 03 06 EE 77 83 D2   F..V.... .&...w..
EE10:  00 B9 0C 00 D3 E2 26 03  16 F0 77 8E C2 8B D8 26   ......&. ..w....&
EE20:  C6 07 7F B8 00 00 50 8D  4E FA 16 51 FF 76 F8 FF   ......P. N..Q.v..
EE30:  76 F6 9A D3 30 BC 0B 83  C4 0A 3D 00 00 74 03 E9   v...0... ..=..t..
EE40:  06 00 B8 00 00 E9 45 00  E9 0B FF 83 7E F4 00 75   ......E. ....~..u
EE50:  03 E9 06 00 B8 00 00 E9  33 00 80 7E F2 7F 75 03   ........ 3..~..u.
EE60:  E9 24 00 8B 46 F6 8B 56  F8 8E 06 9E 0D 26 03 06   .$..F..V .....&..
EE70:  EE 77 83 D2 00 B9 0C 00  D3 E2 26 03 16 F0 77 8E   .w...... ..&...w.
EE80:  C2 8B D8 26 C6 07 FF B8  01 00 E9 00 00 5E 5F 8B   ...&.... .....^_.
EE90:  E5 5D CB 55 8B EC 81 EC  0A 00 57 56 C4 5E 0A 26   .].U.... ..WV.^.&
EEA0:  8B 47 04 89 46 FE 8B 46  0E E9 38 00 C7 46 FC 06   .G..F..F ..8..F..
EEB0:  00 8A 46 FE 25 01 00 3D  01 00 1B C0 25 01 00 05   ..F.%..= ....%...
EEC0:  01 00 01 46 FE E9 2C 00  C7 46 FC 02 00 8A 46 FE   ...F..,. .F....F.
EED0:  25 01 00 3D 01 00 1B C0  25 FF FF 05 07 00 01 46   %..=.... %......F
EEE0:  FE E9 10 00 0B C0 75 03  E9 C1 FF 48 75 03 E9 D7   ......u. ...Hu...
EEF0:  FF E9 00 00 83 66 FE 07  C7 46 F6 00 00 E9 03 00   .....f.. .F......
EF00:  FF 46 F6 83 7E F6 03 7E  03 E9 51 00 8B 5E FE D1   .F..~..~ ..Q..^..
EF10:  E3 8B 87 82 4E 99 03 46  06 13 56 08 89 46 F8 89   ....N..F ..V..F..
EF20:  56 FA 8B 46 F8 8B 56 FA  8E 06 9E 0D 26 03 06 EE   V..F..V. ....&...
EF30:  77 83 D2 00 B9 0C 00 D3  E2 26 03 16 F0 77 8E C2   w....... .&...w..
EF40:  8B D8 26 80 3F 00 75 03  E9 03 00 E9 0F 00 8A 46   ..&.?.u. .......F
EF50:  FE 02 46 FC 25 07 00 89  46 FE E9 A3 FF 83 7E F6   ..F.%... F.....~.
```

```
EF60:  03 7F 03 E9 06 00 B8 00  00 E9 33 00 8B 46 FE C4   ........ ..3..F..
EF70:  5E 0A 26 89 47 04 8B 5E  FE D1 E3 D1 E3 8B 87 D2   ^.&.G..^ ........
EF80:  06 C4 5E 0A 26 01 07 8B  5E FE D1 E3 D1 E3 8B 87   ..^.&... ^.......
EF90:  D0 06 C4 5E 0A 26 01 47  02 B8 01 00 E9 00 00 5E   ...^.&.G .......^
EFA0:  5F 8B E5 5D CB 55 8B EC  81 EC 0A 00 57 56 C4 5E   _..].U.. ....WV.^
EFB0:  0A 26 8B 47 04 89 46 FE  8B 46 0E E9 38 00 C7 46   .&.G..F. .F..8..F
EFC0:  FC 07 00 8A 46 FE 25 01  00 3D 01 00 1B C0 25 FF   ....F.%. .=....%.
EFD0:  FF 05 03 00 01 46 FE E9  2C 00 C7 46 FC 01 00 8A   .....F.. ,..F....
EFE0:  46 FE 25 01 00 3D 01 00  1B C0 25 01 00 05 05 00   F.%..=.. ..%.....
EFF0:  01 46 FE E9 10 00 0B C0  75 03 E9 C1 FF 48 75 03   .F...... u....Hu.
F000:  E9 D7 FF E9 00 00 83 66  FE 07 C7 46 F6 00 00 E9   .......f ...F....
F010:  03 00 FF 46 F6 83 7E F6  08 7E 03 E9 51 00 8A 46   ...F..~. .~..Q..F
F020:  FE 02 46 FC 25 07 00 89  46 FE 8B 5E FE D1 E3 8B   ..F.%... F..^....
F030:  87 82 4E 99 03 46 06 13  56 08 89 46 F8 89 56 FA   ..N..F.. V..F..V.
F040:  8B 46 F8 8B 56 FA 8E 06  9E 0D 26 03 06 EE 77 83   .F..V... ..&...w.
F050:  D2 00 B9 0C 00 D3 E2 26  03 16 F0 77 8E C2 8B D8   .......& ...w....
F060:  26 80 3F 00 75 03 E9 03  00 E9 03 00 E9 A3 FF 83   &.?.u... ........
F070:  7E F6 08 7F 03 E9 06 00  B8 00 00 E9 33 00 8B 46   ~....... ....3..F
F080:  FE C4 5E 0A 26 89 47 04  8B 5E FE D1 E3 D1 E3 8B   ..^.&.G. .^......
F090:  87 D2 06 C4 5E 0A 26 01  07 8B 5E FE D1 E3 D1 E3   ....^.&. ..^.....
F0A0:  8B 87 D0 06 C4 5E 0A 26  01 47 02 B8 01 00 E9 00   .....^.& .G......
F0B0:  00 5E 5F 8B E5 5D CB 55  8B EC 81 EC 02 00 57 56   .^_..].U ......WV
F0C0:  C7 06 B6 4E 00 00 8B 46  06 8B 56 08 A3 9E 4E 89   ...N...F ..V...N.
F0D0:  16 A0 4E C7 46 FE 01 00  E9 03 00 FF 46 FE 83 7E   ..N.F... ....F..~
F0E0:  FE 06 7C 03 E9 10 00 8B  5E FE D1 E3 D1 E3 C7 87   ..|..... ^.......
F0F0:  9E 4E FF FF E9 E4 FF 5E  5F 8B E5 5D CB 55 8B EC   .N.....^ _..].U..
F100:  81 EC 06 00 57 56 A1 B6  4E 40 B9 06 00 99 F7 F9   ....WV.. N@......
F110:  89 16 B6 4E C4 5E 0A 26  8B 07 26 8B 57 02 8B 1E   ...N.^.& ..&.W...
F120:  B6 4E D1 E3 D1 E3 89 87  9E 4E 89 97 A0 4E 83 7E   .N...... .N...N.~
F130:  12 FF 74 03 E9 DC 00 A1  B6 4E 40 99 F7 F9 89 56   ..t..... .N@....V
F140:  FE 8B 5E FE D1 E3 D1 E3  83 BF 9E 4E 00 7D 03 E9   ..^..... ...N.}..
F150:  C1 00 8B 46 FE 05 03 00  99 F7 F9 89 56 FC 8B 1E   ...F.... ....V...
F160:  B6 4E D1 E3 D1 E3 8B 87  9E 4E 8B 5E FE D1 E3 D1   .N...... .N.^....
F170:  E3 2B 87 9E 4E 99 2B C2  D1 F8 8B 5E FC D1 E3 D1   .+..N.+. ...^....
F180:  E3 03 87 9E 4E C4 5E 0A  26 89 07 8B 1E B6 4E D1   ....N.^. &.....N.
F190:  E3 D1 E3 8B 87 A0 4E 8B  5E FE D1 E3 D1 E3 2B 87   ......N. ^.....+.
F1A0:  A0 4E 99 2B C2 D1 F8 8B  5E FC D1 E3 D1 E3 03 87   .N.+.... ^.......
F1B0:  A0 4E C4 5E 0A 26 89 47  02 C4 5E 0A 26 83 3F 01   .N.^.&.G ..^.&.?.
F1C0:  7C 03 E9 08 00 C4 5E 0A  26 C7 07 01 00 C4 5E 0A   |.....^. &.....^.
F1D0:  A1 94 4E 26 39 07 7F 03  E9 09 00 A1 94 4E C4 5E   ..N&9... .....N.^
F1E0:  0A 26 89 07 C4 5E 0A 26  83 7F 02 01 7C 03 E9 09   .&...^.& ....|...
F1F0:  00 C4 5E 0A 26 C7 47 02  01 00 C4 5E 0A A1 96 4E   ..^.&.G. ...^...N
F200:  26 39 47 02 7F 03 E9 0A  00 A1 96 4E C4 5E 0A 26   &9G..... ...N.^.&
F210:  89 47 02 83 3E B2 4E 00  7D 03 E9 0E 00 FF 76 10   .G..>.N. }.....v.
F220:  FF 76 0E 9A B1 0A 96 07  83 C4 04 83 3E CC 06 00   .v...... ....>...
F230:  75 03 E9 4A 00 C4 5E 06  26 8B 07 C4 5E 0A 26 2B   u..J..^. &...^.&+
F240:  07 99 52 50 52 50 9A 74  30 AB 10 C4 5E 06 8B C8   ..RPRP.t 0...^...
F250:  26 8B 47 02 C4 5E 0A 26  2B 47 02 8B DA 99 52 50   &.G..^.& +G....RP
F260:  52 50 8B F1 8B FB 9A 74  30 AB 10 03 F0 13 FA 57   RP.....t 0......W
F270:  56 9A 38 01 24 00 83 C4  04 89 46 FA E9 67 00 C4   V.8.$... ..F..g..
F280:  5E 06 26 8B 47 02 C4 5E  0A 26 2B 47 02 50 9A 04   ^.&.G..^ .&+G.P..
F290:  2F AB 10 83 C4 02 C4 5E  06 26 8B 0F C4 5E 0A 26   /......^ .&...^.&
F2A0:  2B 0F 51 8B F0 9A 04 2F  AB 10 83 C4 02 3B C6 7F   +.Q..../ .....;..
F2B0:  03 E9 18 00 C4 5E 06 26  8B 07 C4 5E 0A 26 2B 07   .....^.& ...^.&+.
```

```
F2C0:  50 9A 04 2F AB 10 83 C4  02 E9 17 00 C4 5E 06 26   P../.... .....^.&
F2D0:  8B 47 02 C4 5E 0A 26 2B  47 02 50 9A 04 2F AB 10   .G..^.&+ G.P../..
F2E0:  83 C4 02 89 46 FA 8B 46  FA E9 00 00 5E 5F 8B E5   ....F..F ....^_..
F2F0:  5D CB 55 8B EC 81 EC 08  00 57 56 A1 B6 4E 40 B9   ].U..... .WV..N@.
F300:  06 00 99 F7 F9 89 56 FC  8B 5E FC D1 E3 D1 E3 83   ......V. .^......
F310:  BF 9E 4E 00 7C 03 E9 29  00 8B 1E B6 4E D1 E3 D1   ..N.|..) ....N...
F320:  E3 8B 87 9E 4E 2B 06 9E  4E 89 46 FA 8B 1E B6 4E   ....N+.. N.F....N
F330:  D1 E3 D1 E3 8B 87 A0 4E  2B 06 A0 4E 89 46 F8 E9   .......N +..N.F..
F340:  34 00 8B 1E B6 4E D1 E3  D1 E3 8B 87 9E 4E 8B 5E   4....N.. .....N.^
F350:  FC D1 E3 D1 E3 2B 87 9E  4E 89 46 FA 8B 1E B6 4E   .....+.. N.F....N
F360:  D1 E3 D1 E3 8B 87 A0 4E  8B 5E FC D1 E3 D1 E3 2B   .......N .^.....+
F370:  87 A0 4E 89 46 F8 FF 76  FA FF 76 F8 9A CE 01 24   ..N.F..v ..v....$
F380:  00 83 C4 04 89 46 FE 83  7E 06 00 75 03 E9 20 00   .....F.. ~..u.. .
F390:  83 7E FE 00 7D 03 E9 17  00 81 7E FE B4 00 7C 03   .~..}... ..~...|.
F3A0:  E9 08 00 81 46 FE B4 00  E9 05 00 81 6E FE B4 00   ....F... ....n...
F3B0:  8B 46 FE E9 00 00 5E 5F  8B E5 5D CB 55 8B EC 81   .F....^_ ..].U...
F3C0:  EC 0A 00 57 56 C4 5E 06  26 C7 07 01 00 C4 5E 0A   ...WV.^. &.....^.
F3D0:  26 C7 07 02 00 83 3E CE  06 00 74 03 E9 03 00 E9   &.....>. ..t.....
F3E0:  27 01 83 3E F8 06 02 7D  03 E9 1D 01 C7 46 FA 00   '..>...} .....F..
F3F0:  00 C7 46 FC 00 00 A1 F8  06 3D 05 00 7F 03 E9 03   ..F..... .=......
F400:  00 B8 05 00 89 46 F8 A1  F8 06 48 89 46 FE E9 03   .....F.. ..H.F...
F410:  00 FF 4E FE A1 F8 06 2B  46 F8 3B 46 FE 7E 03 E9   ..N....+ F.;F.~..
F420:  35 00 8B 46 FE B9 05 00  99 F7 F9 8B DA B1 03 D3   5..F.... ........
F430:  E3 83 BF BA 4E 00 7F 03  E9 19 00 8B 46 FE BA 05   ....N... ....F...
F440:  00 8B DA 99 F7 FB 8B DA  D3 E3 8B 87 BA 4E 01 46   ........ .....N.F
F450:  FA FF 46 FC E9 BA FF 83  7E FC 02 7C 03 E9 03 00   ..F..... ~..|....
F460:  E9 A6 00 8B 46 FA 99 F7  7E FC 89 46 FA C7 46 F6   ....F... ~..F..F.
F470:  00 00 A1 F8 06 48 89 46  FE E9 03 00 FF 4E FE A1   .....H.F .....N..
F480:  F8 06 2B 46 F8 3B 46 FE  7E 03 E9 3E 00 8B 46 FE   ..+F.;F. ~..>..F.
F490:  B9 05 00 99 F7 F9 8B DA  B1 03 D3 E3 83 BF BA 4E   ........ .......N
F4A0:  00 7F 03 E9 22 00 8B 46  FE BA 05 00 8B DA 99 F7   ...."..F ........
F4B0:  FB 8B DA D3 E3 8B 87 BA  4E 2B 46 FA 50 9A 04 2F   ........ N+F.P../
F4C0:  AB 10 83 C4 02 01 46 F6  E9 B1 FF 8B 46 F6 99 F7   ......F. ....F...
F4D0:  7E FC 05 05 00 B9 0A 00  99 F7 F9 89 46 F6 8B 46   ~....... ....F..F
F4E0:  F6 3D 01 00 7C 03 E9 03  00 B8 01 00 C4 5E 06 26   .=..|... .....^.&
F4F0:  89 07 8B 46 F6 05 02 00  3D 02 00 7C 03 E9 03 00   ...F.... =..|....
F500:  B8 02 00 C4 5E 0A 26 89  07 5E 5F 8B E5 5D CB 55   ....^.&. .^_..].U
F510:  8B EC 81 EC 04 00 57 56  A1 F8 06 B9 05 00 99 F7   ......WV ........
F520:  F9 8B DA B1 03 D3 E3 C4  76 0E 26 8B 04 89 87 B8   ........ v.&.....
F530:  4E C7 46 FE FF FF C4 5E  12 26 83 3F 00 7D 03 E9   N.F....^ .&.?.}..
F540:  9A 00 8D 46 FE 16 50 8D  56 FC 16 52 FF 76 0C FF   ...F..P. V..R.v..
F550:  76 0A FF 76 08 FF 76 06  C4 5E 0E 26 FF 37 9A 28   v..v..v. .^.&.7.(
F560:  38 BC 0B 83 C4 12 3D 00  00 75 03 E9 6E 00 A1 F8   8.....=. .u..n...
F570:  06 B9 05 00 99 F7 F9 8B  DA B1 03 D3 E3 8B 46 FE   ........ ......F.
F580:  89 87 BA 4E A1 F8 06 BA  05 00 8B DA 99 F7 FB C4   ...N.... ........
F590:  76 0A 26 8B 04 C4 76 06  26 03 04 8B F0 D1 E0 D1   v.&...v. &.......
F5A0:  E0 03 C6 8B F2 D3 E6 89  84 BC 4E A1 F8 06 99 F7   ........ ..N.....
F5B0:  FB C4 76 0A 26 8B 44 02  C4 76 06 26 03 44 02 8B   ..v.&.D. .v.&.D..
F5C0:  F0 D1 E0 D1 E0 03 C6 8B  F2 D3 E6 89 84 BE 4E FF   ........ ......N.
F5D0:  06 F8 06 B8 01 00 E9 09  00 E9 06 00 B8 00 00 E9   ........ ........
F5E0:  00 00 5E 5F 8B E5 5D CB  55 8B EC 81 EC 18 00 57   ..^_..]. U......W
F5F0:  56 8B 46 0A 0B 46 08 75  03 E9 0B 00 8B 46 0E 0B   V.F..F.u .....F..
F600:  46 0C 74 03 E9 06 00 B8  00 00 E9 19 02 C4 5E 08   F.t..... ......^.
F610:  26 8B 07 C4 5E 0C 26 2B  07 8B C8 D1 E0 D1 E0 03   &...^.&+ ........
```

```
F620:  C1 D1 E0 89 46 F8 C4 5E  08 26 8B 47 02 C4 5E 0C   ....F..^ .&.G..^.
F630:  26 2B 47 02 8B C8 D1 E0  D1 E0 03 C1 D1 E0 89 46   &+G..... .......F
F640:  F6 C4 5E 10 26 C7 07 FF  FF FF 76 F8 FF 76 F6 9A   ..^.&... ..v..v..
F650:  CE 01 24 00 83 C4 04 89  46 FA 3D 00 00 7C 03 E9   ..$..... F.=..|..
F660:  06 00 B8 00 00 E9 BE 01  8B 46 FA 05 0B 00 D1 E0   ........ .F......
F670:  B9 2D 00 99 F7 F9 B9 08  00 99 F7 F9 89 56 F4 8B   .-...... .....V..
F680:  46 F4 2B 46 06 50 9A 04  2F AB 10 83 C4 02 89 46   F.+F.P.. /......F
F690:  F2 B8 08 00 2B 46 F2 3B  46 F2 7E 03 E9 0C 00 B8   ....+F.; F.~.....
F6A0:  08 00 2B 46 F2 89 46 E8  E9 15 00 8B 46 F4 2B 46   ..+F..F. ....F.+F
F6B0:  06 50 9A 04 2F AB 10 83  C4 02 89 46 F2 89 46 E8   .P../... ...F..F.
F6C0:  83 7E E8 02 7E 03 E9 06  00 B8 00 00 E9 57 01 8B   .~..~... .....W..
F6D0:  46 F8 99 52 50 52 50 9A  74 30 AB 10 8B C8 8B 46   F..RPRP. t0.....F
F6E0:  F6 8B DA 99 52 50 52 50  8B F1 8B FB 9A 74 30 AB   ....RPRP .....t0.
F6F0:  10 03 F0 13 FA 57 56 9A  38 01 24 00 83 C4 04 89   .....WV. 8.$.....
F700:  46 EA 8B 46 06 2D 04 00  50 9A 04 2F AB 10 83 C4   F..F.-.. P../....
F710:  02 3D 02 00 7F 03 E9 08  00 C7 46 EE 04 00 E9 05   .=...... ..F.....
F720:  00 C7 46 EE 00 00 B9 B4  00 BA 08 00 8B 46 06 05   ..F..... .....F..
F730:  04 00 8B DA 99 F7 FB 8B  C2 F7 E9 99 33 C2 2B C2   ........ ....3.+.
F740:  B9 03 00 D3 F8 33 C2 2B  C2 89 46 EC 8B 46 FA B9   .....3.+ ..F..F..
F750:  B4 00 99 F7 F9 2B 56 EC  52 9A 04 2F AB 10 83 C4   .....+V. R../....
F760:  02 89 46 FC 8B 46 EE 2B  46 06 50 9A 04 2F AB 10   ..F..F.+ F.P../..
F770:  83 C4 02 B9 B4 00 F7 E9  99 33 C2 2B C2 B9 03 00   ........ .3.+....
F780:  D3 F8 33 C2 2B C2 89 46  F0 FF 76 FC 9A 9F 00 24   ..3.+..F ..v....$
F790:  00 83 C4 02 89 46 FE 8B  46 FE B9 64 00 99 F7 F9   .....F.. F..d....
F7A0:  50 9A 04 2F AB 10 83 C4  02 89 46 FE B8 64 00 BA   P../.... ..F..d..
F7B0:  00 00 52 50 8B 46 EA 05  05 00 F7 6E FE 52 50 9A   ..RP.F.. ...n.RP.
F7C0:  DA 2F AB 10 C4 5E 14 26  89 07 FF 76 F0 9A 06 00   ./...^.& ...v....
F7D0:  24 00 83 C4 02 89 46 FE  8B 46 FE B9 64 00 99 F7   $.....F. .F..d...
F7E0:  F9 50 9A 04 2F AB 10 83  C4 02 89 46 FE B8 E8 03   .P../... ...F....
F7F0:  BA 00 00 52 50 C4 5E 14  26 8B 07 F7 6E FE 52 50   ...RP.^. &...n.RP
F800:  9A DA 2F AB 10 40 C4 5E  10 26 89 07 C4 5E 10 A1   ../..@.^ .&...^..
F810:  F2 06 26 39 07 7C 03 E9  06 00 B8 00 00 E9 06 00   ..&9.|.. ........
F820:  B8 01 00 E9 00 00 5E 5F  8B E5 5D CB 55 8B EC 81   ......^_ ..].U...
F830:  EC 08 00 57 56 C4 5E 06  26 8B 47 02 89 46 FA E9   ...WV.^. &.G..F..
F840:  03 00 FF 46 FA C4 5E 06  8B 46 FA 26 39 47 04 7D   ...F..^. .F.&9G.}
F850:  03 E9 D3 00 C4 5E 06 26  8B 47 06 89 46 F8 E9 03   .....^.& .G..F...
F860:  00 FF 46 F8 C4 5E 06 8B  46 F8 26 39 47 08 7D 03   ..F..^.. F.&9G.}.
F870:  E9 B1 00 83 7E 0E 00 74  03 E9 3F 00 C4 5E 0A 8B   ....~..t ..?..^..
F880:  46 FA 26 39 47 02 7E 03  E9 30 00 C4 5E 0A 8B 46   F.&9G.~. .0..^..F
F890:  FA 26 39 47 04 7D 03 E9  21 00 C4 5E 0A 8B 46 F8   .&9G.}.. !..^..F.
F8A0:  26 39 47 06 7E 03 E9 12  00 C4 5E 0A 8B 46 F8 26   &9G.~... ..^..F.&
F8B0:  39 47 08 7D 03 E9 03 00  E9 A6 FF 8B 46 FA 99 8B   9G.}.... ....F...
F8C0:  C8 8B 46 F8 8B DA F7 2E  98 4E 03 C8 13 DA 89 4E   ..F..... .N.....N
F8D0:  FC 89 5E FE 8B 46 FC 8B  56 FE 8E 06 9E 0D 26 03   ..^..F.. V.....&.
F8E0:  06 EE 77 83 D2 00 B9 0C  00 D3 E2 26 03 16 F0 77   ..w..... ...&...w
F8F0:  8E C2 8B D8 26 80 3F 00  75 03 E9 24 00 8B 46 FC   ....&.?. u..$..F.
F900:  8B 56 FE 8E 06 9E 0D 26  03 06 EE 77 83 D2 00 B9   .V.....& ...w....
F910:  0C 00 D3 E2 26 03 16 F0  77 8E C2 8B D8 26 C6 07   ....&... w....&..
F920:  00 E9 3D FF E9 1B FF 5E  5F 8B E5 5D CB 55 8B EC   ..=....^ _..].U..
F930:  81 EC 00 00 57 56 C7 06  F8 06 00 00 5E 5F 8B E5   ....WV.. ....^_..
F940:  5D CB 55 8B EC 81 EC 08  00 57 56 8E 06 A4 0D 26   ].U..... .WV....&
F950:  83 3E DE 00 00 75 03 E9  51 00 8D 46 0A 89 46 F8   .>...u.. Q..F..F.
F960:  8C 56 FA B8 3F 08 1E 50  B8 42 08 1E 50 9A 36 07   .V..?..P .B..P.6.
F970:  AB 10 83 C4 08 89 46 FC  89 56 FE FF 76 FA FF 76   ......F. .V..v..v
```

```
F980:  F8 FF 76 08 FF 76 06 FF  76 FE FF 76 FC 9A 12 29   ..v..v.. v..v...)
F990:  AB 10 83 C4 0C 2B C0 89  46 FA 89 46 F8 FF 76 FE   .....+.. F..F..v.
F9A0:  FF 76 FC 9A 3C 06 AB 10  83 C4 04 5E 5F 8B E5 5D   .v..<... ...^_..]
F9B0:  CB 55 8B EC 81 EC 12 00  57 56 8E 06 A4 0D 26 83   .U...... WV....&.
F9C0:  3E DE 00 00 75 03 E9 A5  01 C4 5E 0E 26 8B 07 C4   >...u... ..^.&...
F9D0:  5E 0A 26 3B 07 7F 03 E9  03 00 26 8B 07 89 46 F6   ^.&;.... ..&...F.
F9E0:  C4 5E 0E 26 8B 47 02 C4  5E 0A 26 3B 47 02 7F 03   .^.&.G.. ^.&;G...
F9F0:  E9 04 00 26 8B 47 02 89  46 F2 C4 5E 0A 26 8B 47   ...&.G.. F..^.&.G
FA00:  02 C4 5E 0E 26 2B 47 02  50 9A 04 2F AB 10 83 C4   ..^.&+G. P../....
FA10:  02 C4 5E 0A 26 8B 0F C4  5E 0E 26 2B 0F 51 8B F0   ..^.&... ^.&+.Q..
FA20:  9A 04 2F AB 10 83 C4 02  3B C6 7F 03 E9 18 00 C4   ../..... ;.......
FA30:  5E 0A 26 8B 07 C4 5E 0E  26 2B 07 50 9A 04 2F AB   ^.&...^. &+.P../.
FA40:  10 83 C4 02 E9 17 00 C4  5E 0A 26 8B 47 02 C4 5E   ........ ^.&.G..^
FA50:  0E 26 2B 47 02 50 9A 04  2F AB 10 83 C4 02 89 46   .&+G.P.. /......F
FA60:  EE C7 46 FC 01 00 C7 46  F4 01 00 C7 46 F0 00 00   ..F....F ....F...
FA70:  E9 03 00 FF 46 F4 8B 46  F4 39 46 EE 7F 03 E9 DE   ....F..F .9F.....
FA80:  00 C4 5E 0A 26 8B 07 F7  6E F4 8B C8 8B 46 EE 2B   ..^.&... n....F.+
FA90:  46 F4 C4 5E 0E 26 F7 2F  03 C1 99 F7 7E EE 89 46   F..^.&./ ....~..F
FAA0:  F6 C4 5E 0A 26 8B 47 02  F7 6E F4 8B 4E EE 2B 4E   ..^.&.G. .n..N.+N
FAB0:  F4 C4 5E 0E 8B D0 26 8B  47 02 8B DA F7 E9 03 C3   ..^...&. G.......
FAC0:  99 F7 7E EE 89 46 F2 C4  5E 0A 8B 46 F6 26 39 07   ..~..F.. ^..F.&9.
FAD0:  74 03 E9 0F 00 C4 5E 0A  8B 46 F2 26 39 47 02 75   t.....^. .F.&9G.u
FAE0:  03 E9 1D 00 C4 5E 0E 8B  46 F6 26 39 07 74 03 E9   .....^.. F.&9.t..
FAF0:  12 00 C4 5E 0E 8B 46 F2  26 39 47 02 74 03 E9 03   ...^..F. &9G.t...
FB00:  00 E9 6F FF FF 46 F0 8B  46 F6 99 8B C8 A1 98 4E   ..o..F.. F......N
FB10:  8B DA F7 6E F2 03 C8 13  DA 89 4E F8 89 5E FA 8B   ...n.... ..N..^..
FB20:  46 F8 8B 56 FA 8E 06 9E  0D 26 03 06 EE 77 83 D2   F..V.... .&...w..
FB30:  00 B9 0C 00 D3 E2 26 03  16 F0 77 8E C2 8B D8 26   ......&. ..w....&
FB40:  8A 07 88 46 FE 80 7E FE  FF 75 03 E9 09 00 80 7E   ...F..~. .u.....~
FB50:  FE 7F 74 03 E9 05 00 C7  46 FC 00 00 E9 14 FF 83   ..t..... F.......
FB60:  7E F0 01 7F 03 E9 06 00  8B 46 FC E9 06 00 B8 00   ~....... .F......
FB70:  00 E9 00 00 5E 5F 8B E5  5D CB 55 8B EC 81 EC 06   ....^_.. ].U.....
FB80:  00 57 56 C7 46 FE 00 00  2B C0 89 46 FC 89 46 FA   .WV.F... +..F..F.
FB90:  E9 08 00 83 46 FA 01 83  56 FC 00 8E 06 9C 0D 26   ....F... V......&
FBA0:  A1 E8 00 8E 06 9A 0D 26  F7 2E E6 00 3B 56 FC 7D   .......& ....;V.}
FBB0:  03 E9 44 00 7E 03 E9 08  00 3B 46 FA 77 03 E9 37   ..D.~... .;F.w..7
FBC0:  00 8B 46 FA 8B 56 FC 8E  06 9E 0D 26 03 06 EE 77   ..F..V.. ...&...w
FBD0:  83 D2 00 B9 0C 00 D3 E2  26 03 16 F0 77 8E C2 8B   ........ &...w...
FBE0:  D8 26 8A 07 2A E4 B1 03  8B 5E FA D3 E3 83 C3 0D   .&..*... .^......
FBF0:  F7 EB 01 46 FE E9 9B FF  8B 46 FE E9 00 00 5E 5F   ...F.... .F....^_
FC00:  8B E5 5D CB 55 8B EC 81  EC 10 00 57 56 8D 46 F0   ..].U... ...WV.F.
FC10:  16 50 9A 2C 2A AB 10 83  C4 04 B8 E8 03 BA 00 00   .P.,*... ........
FC20:  52 50 8B 4E 06 8B 5E 08  03 4E F4 83 D3 00 53 51   RP.N..^. .N....SQ
FC30:  9A DA 2F AB 10 03 46 F0  13 56 F2 89 46 FA 89 56   ../...F. .V..F..V
FC40:  FC B8 E8 03 BA 00 00 52  50 8B 46 06 8B 56 08 03   .......R P.F..V..
FC50:  46 F4 83 D2 00 52 50 9A  A6 30 AB 10 89 46 FE 8B   F....RP. .0...F..
FC60:  46 F0 8B 56 F2 39 56 FC  7D 03 E9 1D 00 7E 03 E9   F..V.9V. }....~..
FC70:  08 00 39 46 FA 77 03 E9  10 00 8D 46 F0 16 50 9A   ..9F.w.. ...F..P.
FC80:  2C 2A AB 10 83 C4 04 E9  D5 FF 8B 46 F4 39 46 FE   ,*...... ...F.9F.
FC90:  77 03 E9 2B 00 8B 46 F0  8B 56 F2 39 56 FC 7D 03   w..+..F. .V.9V.}.
FCA0:  E9 1D 00 7E 03 E9 08 00  39 46 FA 73 03 E9 10 00   ...~.... 9F.s....
FCB0:  8D 46 F0 16 50 9A 2C 2A  AB 10 83 C4 04 E9 CA FF   .F..P.,* ........
FCC0:  5E 5F 8B E5 5D CB 55 8B  EC 81 EC 02 00 57 56 B8   ^_..].U. .....WV.
FCD0:  B6 00 50 B8 43 00 50 9A  1E 2A AB 10 83 C4 04 B8   ..P.C.P. .*......
```

```
FCE0:  33 00 50 B8 42 00 50 9A  1E 2A AB 10 83 C4 04 B8   3.P.B.P. .*......
FCF0:  05 00 50 B8 42 00 50 9A  1E 2A AB 10 83 C4 04 B8   ..P.B.P. .*......
FD00:  61 00 50 9A 10 2A AB 10  83 C4 02 88 46 FE 8A 46   a.P..*.. ....F..F
FD10:  FE 0C 03 98 50 B8 61 00  50 9A 1E 2A AB 10 83 C4   ....P.a. P..*....
FD20:  04 B8 64 00 BA 00 00 52  50 9A 04 00 A0 0F 83 C4   ..d....R P.......
FD30:  04 8A 46 FE 98 50 B8 61  00 50 9A 1E 2A AB 10 83   ..F..P.a .P..*...
FD40:  C4 04 5E 5F 8B E5 5D CB  55 8B EC 81 EC 00 00 57   ..^_..]. U......W
FD50:  56 C7 06 4A 08 FF FF C7  06 4C 08 00 00 C7 06 4E   V..J.... .L.....N
FD60:  08 FF FF 5E 5F 8B E5 5D  CB 55 8B EC 81 EC 00 00   ...^_..] .U......
FD70:  57 56 C4 5E 0A 26 8A 07  C4 5E 06 26 32 07 25 7F   WV.^.&.. .^.&2.%.
FD80:  00 C4 5E 0A 26 31 07 B1  07 C4 5E 06 26 8B 47 02   ..^.&1.. ..^.&.G.
FD90:  D3 E0 C4 5E 0A 26 32 07  25 7F 00 C4 5E 06 26 8B   ...^.&2. %...^.&.
FDA0:  57 02 D3 E2 33 C2 C4 5E  0A 26 89 07 C4 5E 06 26   W...3..^ .&...^.&
FDB0:  8B 47 0E C4 5E 0A 26 89  47 02 C4 5E 06 26 8B 47   .G..^.&. G..^.&.G
FDC0:  10 C4 5E 0A 26 89 47 04  C4 5E 06 26 8B 47 20 25   ..^.&.G. .^.&.G %
FDD0:  FE 01 D1 F8 C4 5E 0A 26  8A 6F 07 2A C9 0B C1 C4   .....^.& .o.*....
FDE0:  5E 0A 26 89 47 06 C4 5E  06 26 8B 47 22 25 FE 01   ^.&.G..^ .&.G"%..
FDF0:  D1 F8 C4 5E 0A 26 8A 4F  06 80 E1 FF 8A D1 8A F0   ...^.&.O ........
FE00:  C4 5E 0A 26 89 57 06 C4  5E 06 26 8B 47 24 C4 5E   .^.&.W.. ^.&.G$.^
FE10:  0A 26 89 47 08 5E 5F 8B  E5 5D CB 55 8B EC 81 EC   .&.G.^_. .].U....
FE20:  00 00 57 56 C4 5E 06 26  8A 07 25 7F 00 C4 5E 0A   ..WV.^.& ..%...^.
FE30:  26 89 07 B1 07 C4 5E 06  26 8B 07 D3 E8 C4 5E 0A   &.....^. &.....^.
FE40:  26 89 47 02 C4 5E 06 26  8B 47 02 C4 5E 0A 26 89   &.G..^.& .G..^.&.
FE50:  47 0E C4 5E 06 26 8B 47  04 C4 5E 0A 26 89 47 10   G..^.&.G ..^.&.G.
FE60:  C4 5E 06 26 8A 47 06 2A  E4 D1 E0 C4 5E 0A 26 89   .^.&.G.* ....^.&.
FE70:  47 20 C4 5E 06 26 8A 47  07 2A E4 D1 E0 C4 5E 0A   G .^.&.G .*....^.
FE80:  26 89 47 22 C4 5E 06 26  8B 47 08 C4 5E 0A 26 89   &.G".^.& .G..^.&.
FE90:  47 24 5E 5F 8B E5 5D CB  55 8B EC 81 EC 00 00 57   G$^_..]. U......W
FEA0:  56 C4 5E 0E 26 C7 07 00  00 C4 5E 0E 2B C0 26 89   V.^.&... ..^.+.&.
FEB0:  47 04 26 89 47 02 B8 1A  00 F7 6E 0C 8B D8 C4 76   G.&.G... ..n....v
FEC0:  06 26 8B 00 25 FE 01 D1  F8 C4 5E 0E 26 8A 6F 01   .&..%... ..^.&.o.
FED0:  2A C9 0B C1 C4 5E 0E 26  89 07 B8 1A 00 F7 6E 0C   *....^.& ......n.
FEE0:  8B F0 C4 5E 06 26 8B 40  02 25 FE 01 D1 F8 C4 5E   ...^.&.@ .%.....^
FEF0:  0E 26 8A 0F 80 E1 FF 8A  D1 8A F0 C4 5E 0E 26 89   .&...... ....^.&.
FF00:  17 B8 1A 00 F7 6E 0C 8B  F0 C4 5E 06 26 8A 60 18   .....n.. ..^.&.`.
FF10:  D0 E4 2A C0 C4 5E 0E 26  32 67 05 25 00 02 C4 5E   ..*..^.& 2g.%...^
FF20:  0E 26 31 47 04 B8 1A 00  F7 6E 0C 8B F0 C4 5E 06   .&1G.... .n....^.
FF30:  26 8B 40 18 B1 04 D3 E8  8A E0 D0 E4 D0 E4 2A C0   &.@..... ......*.
FF40:  C4 5E 0E 26 32 67 05 25  00 04 C4 5E 0E 26 31 47   .^.&2g.% ...^.&1G
FF50:  04 B8 1A 00 F7 6E 0C 8B  F0 C4 5E 06 26 8B 40 18   .....n.. ..^.&.@.
FF60:  D3 E0 C4 5E 0E 26 32 67  05 25 00 08 C4 5E 0E 26   ...^.&2g .%...^.&
FF70:  31 47 04 B8 1A 00 F7 6E  0C 8B F0 C4 5E 06 26 83   1G.....n ....^.&.
FF80:  78 04 FF 75 03 E9 06 00  B8 01 00 E9 03 00 B8 00   x..u.... ........
FF90:  00 8A E0 2A C0 B1 05 D3  E0 C4 5E 0E 26 32 67 05   ...*.... ..^.&2g.
FFA0:  25 00 20 C4 5E 0E 26 31  47 04 B8 1A 00 F7 6E 0C   %. .^.&1 G.....n.
FFB0:  8B F0 C4 5E 06 26 83 78  10 FF 75 03 E9 06 00 B8   ...^.&.x ..u.....
FFC0:  01 00 E9 03 00 B8 00 00  8A E0 2A C0 B1 06 D3 E0   ........ ..*.....
FFD0:  C4 5E 0E 26 32 67 05 25  00 40 C4 5E 0E 26 31 47   .^.&2g.% .@.^.&1G
FFE0:  04 C4 5E 0E 26 81 67 04  FF EF C4 5E 12 26 81 67   ..^.&.g. ...^.&.g
FFF0:  04 FF EF 83 7E 0A FF 74  03 E9 1E 00 C4 5E 0E 26   ....~..t .....^.&
10000: 81 67 04 00 FE C4 5E 0E  26 81 4F 02 00 FF C4 5E   .g....^. &.O....^
10010: 0E 26 81 4F 02 FF 00 E9  CC 01 B8 1A 00 F7 6E 0A   .&.O.... ......n.
10020: 8B F0 C4 5E 06 8B 46 0C  26 39 40 04 74 03 E9 2D   ...^..F. &9@.t..-
10030: 01 B8 1A 00 F7 6E 0A 8B  F0 C4 5E 06 26 8B 40 06   .....n.. ..^.&.@.
```

```
10040:  25 FE 01 D1 F8 C4 5E 0E  26 8A 6F 03 2A C9 0B C1   %.....^. &.o.*...
10050:  C4 5E 0E 26 89 47 02 B8  1A 00 F7 6E 0A 8B F0 C4   .^.&.G.. ...n....
10060:  5E 06 8B 46 0C 26 39 40  10 74 03 E9 ED 00 B8 1A   ^..F.&9@ .t......
10070:  00 F7 6E 0A 8B F0 C4 5E  06 26 8B 40 12 25 FE 01   ..n....^ .&.@.%..
10080:  D1 F8 C4 5E 12 26 8A 6F  03 2A C9 0B C1 C4 5E 12   ...^.&.o .*....^.
10090:  26 89 47 02 B8 1A 00 F7  6E 0C 8B F0 C4 5E 06 26   &.G..... n....^.&
100A0:  8B 40 10 8B C8 B8 1A 00  F7 6E 0C 8B F0 C4 5E 06   .@...... .n....^.
100B0:  26 39 48 0A 74 03 E9 4E  00 B8 1A 00 F7 6E 0C 8B   &9H.t..N .....n..
100C0:  F0 C4 5E 06 26 8B 40 12  25 FE 01 D1 F8 C4 5E 12   ..^.&.@. %.....^.
100D0:  26 8A 4F 02 80 E1 FF 8A  D1 8A F0 C4 5E 12 26 89   &.O..... ....^.&.
100E0:  57 02 B8 1A 00 F7 6E 0C  8B F0 C4 5E 06 26 8B 40   W.....n. ...^.&.@
100F0:  14 D1 F8 C4 5E 12 26 33  47 04 25 FF 01 C4 5E 12   ....^.&3 G.%...^.
10100:  26 31 47 04 E9 4B 00 B8  1A 00 F7 6E 0C 8B F0 C4   &1G..K.. ...n....
10110:  5E 06 26 8B 40 06 25 FE  01 D1 F8 C4 5E 12 26 8A   ^.&.@.%. ....^.&.
10120:  4F 02 80 E1 FF 8A D1 8A  F0 C4 5E 12 26 89 57 02   O....... ..^.&.W.
10130:  B8 1A 00 F7 6E 0C 8B F0  C4 5E 06 26 8B 40 08 D1   ....n... .^.&.@..
10140:  F8 C4 5E 12 26 33 47 04  25 FF 01 C4 5E 12 26 31   ..^.&3G. %...^.&1
10150:  47 04 C4 5E 0E 26 81 4F  04 00 10 E9 3D 00 B8 1A   G..^.&.O ....=...
10160:  00 F7 6E 0A 8B F0 C4 5E  06 8B 46 0C 26 39 40 10   ..n....^ ..F.&9@.
10170:  74 03 E9 26 00 B8 1A 00  F7 6E 0A 8B F0 C4 5E 06   t..&.... .n....^.
10180:  26 8B 40 12 25 FE 01 D1  F8 C4 5E 0E 26 8A 6F 03   &.@.%... ..^.&.o.
10190:  2A C9 0B C1 C4 5E 0E 26  89 47 02 B8 1A 00 F7 6E   *....^.& .G.....n
101A0:  0C 8B F0 C4 5E 06 26 8B  40 0C 25 FE 01 D1 F8 C4   ....^.&. @.%.....
101B0:  5E 0E 26 8A 4F 02 80 E1  FF 8A D1 8A F0 C4 5E 0E   ^.&.O... ......^.
101C0:  26 89 57 02 B8 1A 00 F7  6E 0C 8B F0 C4 5E 06 26   &.W..... n....^.&
101D0:  8B 40 0E D1 F8 C4 5E 0E  26 33 47 04 25 FF 01 C4   .@....^. &3G.%...
101E0:  5E 0E 26 31 47 04 5E 5F  8B E5 5D CB 55 8B EC 81   ^.&1G.^_ ..].U...
101F0:  EC 02 00 57 56 C4 5E 0E  26 C7 07 FF FF C4 5E 06   ...WV.^. &.....^.
10200:  26 8A 07 2A E4 D1 E0 89  46 FE 8B 46 FE C4 5E 0A   &..*.... F..F..^.
10210:  26 89 07 C4 5E 06 26 8A  47 01 2A E4 D1 E0 89 46   &...^.&. G.*....F
10220:  FE 8B 46 FE C4 5E 0A 26  89 47 02 C4 5E 06 26 F7   ..F..^.& .G..^.&.
10230:  47 04 FF 01 74 03 E9 2E  00 C4 5E 06 26 8A 47 03   G...t... ..^.&.G.
10240:  2A E4 3D FF FF 74 03 E9  1D 00 C4 5E 06 26 8A 47   *.=..t.. ...^.&.G
10250:  02 2A E4 3D FF FF 74 03  E9 0C 00 C4 5E 0A 26 C7   .*.=..t. ....^.&.
10260:  47 0C FF FF E9 46 00 C4  5E 06 26 8A 47 03 2A E4   G....F.. ^.&.G.*.
10270:  D1 E0 89 46 FE 8B 46 FE  C4 5E 0A 26 89 47 0C C4   ...F..F. .^.&.G..
10280:  5E 0A 26 81 7F 0C 68 01  7F 03 E9 09 00 C4 5E 0A   ^.&...h. ......^.
10290:  26 C7 47 0C FF FF C4 5E  06 26 8A 47 02 2A E4 D1   &.G....^ .&.G.*..
102A0:  E0 89 46 FE 8B 46 FE C4  5E 0E 26 89 07 C4 5E 0A   ..F..F.. ^.&...^.
102B0:  26 C7 47 06 FF FF C4 5E  0A 26 C7 47 12 FF FF C4   &.G....^ .&.G....
102C0:  5E 06 26 8B 47 04 25 FF  01 D1 E0 89 46 FE 8B 46   ^.&.G.%. ....F..F
102D0:  FE C4 5E 0A 26 89 47 0E  C4 5E 06 26 8A 47 05 D0   ..^.&.G. .^.&.G..
102E0:  E8 2A E4 C4 5E 0A 26 32  47 18 25 01 00 C4 5E 0A   .*..^.&2 G.%...^.
102F0:  26 31 47 18 C4 5E 06 26  F6 47 05 20 75 03 E9 18   &1G..^.& .G. u...
10300:  00 C4 5E 06 26 F6 47 05  40 75 03 E9 0B 00 C4 5E   ..^.&.G. @u.....^
10310:  0A 26 83 4F 18 08 E9 08  00 C4 5E 0A 26 83 67 18   .&.O.... ..^.&.g.
10320:  F7 B1 04 C4 5E 06 26 8A  47 05 D0 E8 D0 E8 2A E4   ....^.&. G.....*.
10330:  D3 E0 C4 5E 0A 26 32 47  18 25 10 00 C4 5E 0A 26   ...^.&2G .%...^.&
10340:  31 47 18 C4 5E 06 26 8B  47 04 D3 E8 C4 5E 0A 26   1G..^.&. G....^.&
10350:  32 47 18 25 80 00 C4 5E  0A 26 31 47 18 C4 5E 0A   2G.%...^ .&1G..^.
10360:  26 C7 47 0A FF FF C4 5E  0A 26 C7 47 04 FF FF C4   &.G....^ .&.G....
10370:  5E 0A 26 C7 47 10 FF FF  C4 5E 0A 26 C7 47 08 FF   ^.&.G... .^.&.G..
10380:  FF C4 5E 0A 26 C7 47 14  FF FF C4 5E 06 26 8A 47   ..^.&.G. ...^.&.G
10390:  05 25 10 00 D3 E8 E9 00  00 5E 5F 8B E5 5D CB 55   .%...... .^_..].U
```

```
103A0:  8B EC 81 EC 20 00 57 56  C4 5E 06 26 8B 47 02 89    .... .WV .^.&.G..
103B0:  46 F8 C7 46 F4 00 00 FF  76 0C FF 76 0A FF 76 08    F..F.... v..v..v.
103C0:  FF 76 06 9A 29 00 B4 0F  83 C4 08 C7 46 F6 00 00    .v..)... ....F...
103D0:  E9 03 00 FF 46 F6 C4 5E  06 8B 46 F6 26 39 07 7F    ....F..^ ..F.&9..
103E0:  03 E9 CB 00 C7 46 E8 FF  FF 8B 76 F6 D1 E6 C4 5E    .....F.. ..v....^
103F0:  06 26 8B 40 26 89 46 F2  83 7E F2 FF 75 03 E9 AB    .&.@&.F. .~..u...
10400:  00 8D 46 FA 16 50 8D 4E  EC 16 51 FF 76 F2 FF 76    ..F..P.N ..Q.v..v
10410:  E8 8B 56 06 8B 5E 08 81  C2 B6 01 53 52 9A 58 01    ..V..^.. ...SR.X.
10420:  B4 0F 83 C4 10 8B 46 F4  8B C8 D1 E0 03 C1 D1 E0    ......F. ........
10430:  03 46 0A 8B 56 0C 05 0A  00 89 46 E4 89 56 E6 FF    .F..V... ..F..V..
10440:  46 F4 8D 76 EC C4 7E E4  A5 A5 A5 F6 46 F1 10 75    F..v..~. ....F..u
10450:  03 E9 29 00 8B 46 F4 8B  C8 D1 E0 03 C1 D1 E0 03    ..)..F.. ........
10460:  46 0A 8B 56 0C 05 0A 00  89 46 E0 89 56 E2 FF 46    F..V.... .F..V..F
10470:  F4 8D 76 FA C4 7E E0 A5  A5 A5 FF 46 F8 FF 76 F2    ..v..~.. ...F..v.
10480:  8B 46 06 8B 56 08 05 B6  01 52 50 9A 06 00 55 00    .F..V... .RP...U.
10490:  83 C4 06 89 46 F2 B8 1A  00 F7 6E F2 8B F0 C4 5E    ....F... ..n....^
104A0:  06 26 8B 80 C0 01 89 46  E8 E9 4C FF E9 24 FF 8B    .&.....F ..L..$..
104B0:  46 F8 8B C8 D1 E0 03 C1  D1 E0 05 0A 00 89 46 EA    F....... ......F.
104C0:  8B 46 EA E9 00 00 5E 5F  8B E5 5D CB 55 8B EC 81    .F....^_ ..].U...
104D0:  EC 42 00 57 56 9A 08 00  B4 0F FF 76 08 FF 76 06    .B.WV... ...v..v.
104E0:  FF 76 0C FF 76 0A 9A DB  00 B4 0F 83 C4 08 C7 46    .v..v... .......F
104F0:  E2 00 00 C7 46 C2 00 00  E9 03 00 FF 46 C2 C4 5E    ....F... ....F..^
10500:  06 8B 46 C2 26 39 47 02  7F 03 E9 86 00 8D 46 C6    ..F.&9G. ......F.
10510:  16 50 8D 46 C8 16 50 8B  46 E2 FF 46 E2 8B C8 D1    .P.F..P. F..F....
10520:  E0 03 C1 D1 E0 03 46 0A  8B 56 0C 05 0A 00 52 50    ......F. .V....RP
10530:  9A AC 04 B4 0F 83 C4 0C  89 46 C4 83 7E C4 00 75    ........ .F..~..u
10540:  03 E9 2B 00 8D 46 E4 16  50 8D 46 E6 16 50 8B 46    ..+..F.. P.F..P.F
10550:  E2 FF 46 E2 8B C8 D1 E0  03 C1 D1 E0 03 46 0A 8B    ..F..... .....F..
10560:  56 0C 05 0A 00 52 50 9A  AC 04 B4 0F 83 C4 0C FF    V....RP. ........
10570:  76 C4 FF 76 E4 FF 76 C6  8D 46 E6 16 50 8D 46 C8    v..v..v. .F..P.F.
10580:  16 50 FF 76 08 FF 76 06  9A 59 08 B4 0F 83 C4 12    .P.v..v. .Y......
10590:  E9 68 FF 5E 5F 8B E5 5D  CB 55 8B EC 81 EC 08 00    .h.^_..] .U......
105A0:  57 56 B8 1A 00 F7 2E 4C  08 8B F0 C4 5E 06 8B 46    WV.....L ....^..F
105B0:  0A 8B 56 0C 1E 8D B8 B6  01 8B F0 8E DA B9 0D 00    ..V..... ........
105C0:  F3 A5 1F C7 46 F8 01 00  C7 46 FC 01 00 83 3E 4E    ....F... .F....>N
105D0:  08 FF 75 03 E9 FF 01 B8  1A 00 F7 2E 4E 08 8B F0    ..u..... ....N...
105E0:  C4 5E 06 26 F6 80 CE 01  08 75 03 E9 69 01 B8 1A    .^.&.... .u..i...
105F0:  00 F7 2E 4E 08 8B F0 C4  5E 06 26 83 B8 BA 01 FF    ...N.... ^.&.....
10600:  74 03 E9 E7 00 B8 1A 00  F7 2E 4E 08 8B F0 C4 5E    t....... ..N....^
10610:  06 A1 4C 08 26 89 80 BA  01 B8 1A 00 F7 2E 4E 08    ..L.&... ......N.
10620:  8B F0 C4 5E 06 8B 46 12  26 89 80 BC 01 B8 1A 00    ...^..F. &.......
10630:  F7 2E 4C 08 8B F0 C4 5E  06 26 8B 80 C4 01 8B C8    ..L....^ .&......
10640:  B8 1A 00 F7 2E 4E 08 8B  F0 C4 5E 06 26 89 88 BE    .....N.. ..^.&...
10650:  01 C7 46 F8 00 00 83 7E  16 00 75 03 E9 8A 00 B8    ..F....~ ..u.....
10660:  1A 00 F7 2E 4E 08 8B F0  C4 5E 06 A1 4C 08 26 89    ....N... .^..L.&.
10670:  80 C6 01 B8 1A 00 F7 2E  4E 08 8B F0 C4 5E 06 8B    ........ N....^..
10680:  46 14 26 89 80 C8 01 C4  5E 0E 26 8B 47 0E 8B C8    F.&..... ^.&.G...
10690:  B8 1A 00 F7 2E 4E 08 8B  F0 C4 5E 06 26 89 88 CA    .....N.. ..^.&...
106A0:  01 B8 1A 00 F7 2E 4C 08  8B F0 C4 5E 06 A1 4E 08    ......L. ...^..N.
106B0:  26 89 80 C6 01 C4 5E 0E  26 8B 47 0E 8B C8 B8 1A    &.....^. &.G.....
106C0:  00 F7 2E 4C 08 8B F0 C4  5E 06 26 89 88 CA 01 C4    ...L.... ^.&.....
106D0:  5E 0E 26 8B 47 0C 8B C8  B8 1A 00 F7 2E 4C 08 8B    ^.&.G... .....L..
106E0:  F0 C4 5E 06 26 89 88 C8  01 E9 68 00 B8 1A 00 F7    ..^.&... ..h.....
106F0:  2E 4E 08 8B F0 C4 5E 06  26 83 B8 C6 01 FF 74 03    .N....^. &.....t.
```

```
10700:  E9 51 00 B8 1A 00 F7 2E  4E 08 8B F0 C4 5E 06 A1   .Q...... N....^..
10710:  4C 08 26 89 80 C6 01 B8  1A 00 F7 2E 4E 08 8B F0   L.&..... ....N...
10720:  C4 5E 06 8B 46 12 26 89  80 C8 01 B8 1A 00 F7 2E   .^..F.&. ........
10730:  4C 08 8B F0 C4 5E 06 26  8B 80 C4 01 8B C8 B8 1A   L....^.& ........
10740:  00 F7 2E 4E 08 8B F0 C4  5E 06 26 89 88 CA 01 C7   ...N.... ^.&.....
10750:  46 F8 00 00 E9 7F 00 B8  1A 00 F7 2E 4E 08 8B F0   F....... ....N...
10760:  C4 5E 06 26 83 B8 BA 01  FF 74 03 E9 68 00 B8 1A   .^.&.... .t..h...
10770:  00 F7 2E 4E 08 8B F0 C4  5E 06 26 83 B8 C0 01 FF   ...N.... ^.&.....
10780:  74 03 E9 51 00 B8 1A 00  F7 2E 4E 08 8B F0 C4 5E   t..Q.... ..N....^
10790:  06 A1 4C 08 26 89 80 BA  01 B8 1A 00 F7 2E 4E 08   ..L.&... ......N.
107A0:  8B F0 C4 5E 06 8B 46 12  26 89 80 BC 01 B8 1A 00   ...^..F. &.......
107B0:  F7 2E 4C 08 8B F0 C4 5E  06 26 8B 80 C4 01 8B C8   ..L....^ .&......
107C0:  B8 1A 00 F7 2E 4E 08 8B  F0 C4 5E 06 26 89 88 BE   .....N._ ..^.&...
107D0:  01 C7 46 F8 00 00 83 7E  F8 00 74 03 E9 08 00 C7   ..F....~ ..t.....
107E0:  46 FC 00 00 E9 A3 00 83  3E 4E 08 FF 75 03 E9 99   F....... >N..u...
107F0:  00 B8 1A 00 F7 2E 4E 08  8B F0 C4 5E 06 26 8B 80   ......N. ...^.&..
10800:  C0 01 A3 4E 08 B8 1A 00  F7 2E 4E 08 8B F0 C4 5E   ...N.... ..N....^
10810:  06 26 83 B8 C6 01 FF 74  03 E9 6B 00 B8 1A 00 F7   .&.....t ..k.....
10820:  2E 4E 08 8B F0 C4 5E 06  26 F6 80 CE 01 08 75 03   .N....^. &.....u.
10830:  E9 54 00 B8 1A 00 F7 2E  4E 08 8B F0 C4 5E 06 A1   .T...... N....^..
10840:  4C 08 26 89 80 C6 01 B8  1A 00 F7 2E 4E 08 8B F0   L.&..... ....N...
10850:  C4 5E 06 8B 46 12 26 89  80 C8 01 B8 1A 00 F7 2E   .^..F.&. ........
10860:  4C 08 8B F0 C4 5E 06 26  8B 80 C4 01 8B C8 B8 1A   L....^.& ........
10870:  00 F7 2E 4E 08 8B F0 C4  5E 06 26 89 88 CA 01 C7   ...N.... ^.&.....
10880:  46 FC 00 00 E9 03 00 E9  5D FF 83 7E FC 00 75 03   F....... ]..~..u.
10890:  E9 2A 00 A1 4C 08 FF 06  4A 08 8B 36 4A 08 D1 E6   .*..L... J..6J...
108A0:  C4 5E 06 26 89 40 26 B8  1A 00 F7 2E 4C 08 8B F0   .^.&.@&. ....L...
108B0:  C4 5E 06 26 C7 80 C0 01  FF FF E9 14 00 B8 1A 00   .^.&.... ........
108C0:  F7 2E 4C 08 8B F0 C4 5E  06 A1 4E 08 26 89 80 C0   ..L....^ ..N.&...
108D0:  01 B8 1A 00 F7 2E 4C 08  8B F0 C4 5E 06 A1 4A 08   ......L. ...^..J.
108E0:  26 89 80 CC 01 A1 4C 08  FF 06 4C 08 A3 4E 08 5E   &.....L. ..L..N.^
108F0:  5F 8B E5 5D CB 55 8B EC  81 EC 00 00 57 56 C7 06   _..].U.. ....WV..
10900:  4A 08 FF FF C7 06 4C 08  00 00 C7 06 4E 08 FF FF   J.....L. ....N...
10910:  5E 5F 8B E5 5D CB 55 8B  EC 81 EC 00 00 57 56 FF   ^_..].U. .....WV.
10920:  36 E2 4E FF 36 E0 4E B8  01 00 50 B9 02 00 51 FF   6.N.6.N. ..P...Q.
10930:  76 08 FF 76 06 9A C4 08  AB 10 83 C4 0C FF 36 E2   v..v.... ......6.
10940:  4E FF 36 E0 4E B8 01 00  50 B9 02 00 51 8B 56 06   N.6.N... P...Q.V.
10950:  8B 5E 08 83 C2 02 53 52  9A C4 08 AB 10 83 C4 0C   .^....SR ........
10960:  FF 36 E2 4E FF 36 E0 4E  B8 01 00 50 B8 02 00 50   .6.N.6.N ...P...P
10970:  8B 46 06 8B 56 08 05 04  00 52 50 9A C4 08 AB 10   .F..V... .RP.....
10980:  83 C4 0C 5E 5F 8B E5 5D  CB 55 8B EC 81 EC 00 00   ...^_..] .U......
10990:  57 56 FF 36 E2 4E FF 36  E0 4E B8 01 00 50 B9 02   WV.6.N.6 .N...P..
109A0:  00 51 FF 76 08 FF 76 06  9A C4 08 AB 10 83 C4 0C   .Q.v..v. ........
109B0:  FF 36 E2 4E FF 36 E0 4E  B8 01 00 50 B8 04 00 50   .6.N.6.N ...P...P
109C0:  8B 46 06 8B 56 08 05 02  00 52 50 9A C4 08 AB 10   .F..V... .RP.....
109D0:  83 C4 0C B8 00 00 E9 00  00 5E 5F 8B E5 5D CB 55   ........ .^_..].U
109E0:  8B EC 81 EC 1C 00 57 56  9A 08 00 B4 0F FF 76 08   ......WV ......v.
109F0:  FF 76 06 9A 06 00 71 10  83 C4 04 C7 46 E4 00 00   .v....q. ....F...
10A00:  E9 03 00 FF 46 E4 B1 07  C4 5E 06 26 8B 07 D3 E8   ....F... .^.&....
10A10:  3B 46 E4 77 03 E9 21 00  8B 46 E4 8B C8 D1 E0 03   ;F.w..!. .F......
10A20:  C1 D1 E0 03 46 06 8B 56  08 05 0A 00 52 50 9A 79   ....F..V ....RP.y
10A30:  00 71 10 83 C4 04 E9 CA  FF B8 00 00 E9 00 00 5E   .q...... .......^
10A40:  5F 8B E5 5D CB 55 8B EC  81 EC 1C 00 57 56 9A 08   _..].U.. ....WV..
10A50:  00 B4 0F FF 76 08 FF 76  06 9A 9B 01 71 10 83 C4   ....v..v ....q...
```

```
10A60: 04 C7 46 E4 00 00 E9 03  00 FF 46 E4 B1 07 C4 5E   ..F..... ..F....^
10A70: 06 26 8B 07 D3 E8 3B 46  E4 77 03 E9 21 00 8B 46   .&....;F .w..!..F
10A80: E4 8B C8 D1 E0 03 C1 D1  E0 03 46 06 8B 56 08 05   ........ ..F..V..
10A90: 0A 00 52 50 9A 14 02 71  10 83 C4 04 E9 CA FF B8   ..RP...q ........
10AA0: 00 00 E9 00 00 5E 5F 8B  E5 5D CB 55 8B EC 81 EC   .....^_. .].U....
10AB0: 00 00 57 56 FF 36 E2 4E  FF 36 E0 4E B8 01 00 50   ..WV.6.N .6.N...P
10AC0: B9 02 00 51 FF 76 08 FF  76 06 9A 52 07 AB 10 83   ...Q.v.. v..R....
10AD0: C4 0C FF 36 E2 4E FF 36  E0 4E B8 01 00 50 B9 02   ...6.N.6 .N...P..
10AE0: 00 51 8B 56 06 8B 5E 08  83 C2 02 53 52 9A 52 07   .Q.V..^. ...SR.R.
10AF0: AB 10 83 C4 0C FF 36 E2  4E FF 36 E0 4E B8 01 00   ......6. N.6.N...
10B00: 50 B8 02 00 50 8B 46 06  8B 56 08 05 04 00 52 50   P...P.F. .V....RP
10B10: 9A 52 07 AB 10 83 C4 0C  B8 00 00 E9 00 00 5E 5F   .R...... ......^_
10B20: 8B E5 5D CB 55 8B EC 81  EC 00 00 57 56 FF 36 E2   ..].U... ...WV.6.
10B30: 4E FF 36 E0 4E B8 01 00  50 B9 02 00 51 FF 76 08   N.6.N... P...Q.v.
10B40: FF 76 06 9A 52 07 AB 10  83 C4 0C FF 36 E2 4E FF   .v..R... ....6.N.
10B50: 36 E0 4E B8 01 00 50 B8  04 00 50 8B 46 06 8B 56   6.N...P. ..P.F..V
10B60: 08 05 02 00 52 50 9A 52  07 AB 10 83 C4 0C B8 00   ....RP.R ........
10B70: 00 E9 00 00 5E 5F 8B E5  5D CB 55 8B EC 81 EC 4A   ....^_.. ].U....J
10B80: 07 57 56 FF 76 08 FF 76  06 B8 50 08 1E 50 B8 58   .WV.v..v ..P..P.X
10B90: 08 1E 50 8D 86 BC F8 16  50 9A 5A 28 AB 10 83 C4   ..P..... P.Z(....
10BA0: 10 B8 61 08 1E 50 8D 86  BC F8 16 50 9A 36 07 AB   ..a..P.. ...P.6..
10BB0: 10 83 C4 08 89 86 B8 F8  89 96 BA F8 0B D0 74 03   ........ ......t.
10BC0: E9 06 00 B8 FF FF E9 4C  00 8D 86 EE F8 16 50 FF   .......L ......P.
10BD0: 76 0C FF 76 0A 9A 5F 06  B4 0F 83 C4 08 89 86 B6   v..v.._. ........
10BE0: F8 FF B6 BA F8 FF B6 B8  F8 FF B6 B6 F8 B8 01 00   ........ ........
10BF0: 50 8D 86 EE F8 16 50 9A  C4 08 AB 10 83 C4 0C FF   P.....P. ........
10C00: B6 BA F8 FF B6 B8 F8 9A  3C 06 AB 10 83 C4 04 B8   ........ <.......
10C10: 00 00 E9 00 00 5E 5F 8B  E5 5D CB 55 8B EC 81 EC   .....^_. .].U....
10C20: 48 07 57 56 FF 76 08 FF  76 06 B8 50 08 1E 50 B8   H.WV.v.. v..P..P.
10C30: 64 08 1E 50 8D 86 BC F8  16 50 9A 5A 28 AB 10 83   d..P.... .P.Z(...
10C40: C4 10 B8 6D 08 1E 50 8D  86 BC F8 16 50 9A 36 07   ...m..P. ....P.6.
10C50: AB 10 83 C4 08 89 86 B8  F8 89 96 BA F8 0B D0 74   ........ .......t
10C60: 03 E9 06 00 B8 FF FF E9  48 00 FF B6 BA F8 FF B6   ........ H.......
10C70: B8 F8 B8 B8 0B 50 B8 01  00 50 8D 86 EE F8 16 50   .....P.. .P.....P
10C80: 9A 52 07 AB 10 83 C4 0C  8D 86 EE F8 16 50 FF 76   .R...... .....P.v
10C90: 0C FF 76 0A 9A 8C 07 B4  0F 83 C4 08 FF B6 BA F8   ..v..... ........
10CA0: FF B6 B8 F8 9A 3C 06 AB  10 83 C4 04 B8 00 00 E9   .....<.. ........
10CB0: 00 00 5E 5F 8B E5 5D CB  00 10 00 B1 B4 30 CD 21   ..^_..]. .....0.!
10CC0: 3C 02 73 05 33 C0 06 50  CB BF 1D 24 8B 36 02 00   <.s.3..P ...$.6..
10CD0: 2B F7 81 FE 00 10 72 03  BE 00 10 FA 8E D7 81 C4   +.....r. ........
10CE0: FE 50 FB 73 12 16 1F 0E  E8 59 02 33 C0 50 0E E8   .P.s.... .Y.3.P..
10CF0: 3B 05 B8 FF 4C CD 21 8B  C6 B1 04 D3 E0 48 36 A3   ;...L.!. .....H6.
10D00: 74 08 BB 76 08 36 8C 17  83 E4 FE 36 89 67 04 B8   t..v.6.. ...6.g..
10D10: FE FF 50 36 89 67 0A F7  D0 50 36 89 67 06 36 89   ..P6.g.. .P6.g.6.
10D20: 67 08 36 89 26 70 08 03  F7 89 36 02 00 8C C3 2B   g.6.&p.. ..6....+
10D30: DE F7 DB B4 4A CD 21 36  8C 1E B0 08 16 07 FC BF   ....J.!6 ........
10D40: 8A 0E B9 00 51 2B CF 33  C0 F3 AA 16 1F 8B 0E 22   ....Q+.3 ......."
10D50: 0D E3 02 FF D1 9A BE 04  AB 10 9A 10 03 AB 10 33   ........ .......3
10D60: ED 9A 18 01 AB 10 16 1F  FF 36 D5 08 FF 36 D3 08   ........ .6...6..
10D70: FF 36 D1 08 FF 36 CF 08  FF 36 CD 08 9A 00 00 00   .6...6.. .6......
10D80: 00 50 0E E8 FB 00 C3 2E  A1 15 01 8E D8 B8 03 00   .P...... ........
10D90: 36 C7 06 72 08 DD 01 50  0E E8 A8 01 0E E8 8D 04   6..r...P ........
10DA0: 36 81 3E 24 0D D6 D6 75  07 58 50 36 FF 16 28 0D   6.>$...u .XP6..(.
10DB0: B8 FF 00 50 0E FF 16 72  08 1D 24 00 B8 00 35 CD   ...P...r ..$...5.
```

```
10DC0:  21 89 1E 9C 08 8C 06 9E  08 0E 1F B8 00 25 BA E3   !....... .....%..
10DD0:  00 CD 21 16 1F 8B 0E 36  0D E3 2E 8E 06 B0 08 26   ..!....6 .......&
10DE0:  8B 36 2C 00 C5 06 38 0D  8C DA 33 DB 36 FF 1E 34   .6,...8. ..3.6..4
10DF0:  0D 73 05 16 1F E9 6E 01  36 C5 06 3C 0D 8C DA BB   .s....n. 6..<....
10E00:  03 00 36 FF 1E 34 0D 16  1F 8E 06 B0 08 26 8B 0E   ..6..4.. .....&..
10E10:  2C 00 E3 3E 8E C1 33 FF  26 80 3D 00 74 34 B9 0D   ,..>..3. &.=.t4..
10E20:  00 BE 8E 08 F3 A6 74 0B  B9 FF 7F 33 C0 F2 AE 75   ......t. ...3...u
10E30:  21 EB E5 06 1E 07 1F 8B  F7 BF B9 08 B1 04 AC 2C   !....... .......,
10E40:  41 72 0D D2 E0 92 AC 2C  41 72 05 0A C2 AA EB EE   Ar....., Ar......
10E50:  16 1F BB 04 00 80 A7 B9  08 BF B8 00 44 CD 21 72   ........ ....D.!r
10E60:  0A F6 C2 80 74 05 80 8F  B9 08 40 4B 79 E7 BE 40   ....t... ..@Ky..@
10E70:  0D BF 40 0D E8 BA 00 BE  40 0D BF 40 0D E8 B1 00   ..@..... @..@....
10E80:  CB 55 8B EC 33 C9 EB 1A  55 8B EC B9 01 00 EB 12   .U..3... U.......
10E90:  55 8B EC 56 57 B9 00 01  EB 08 55 8B EC 56 57 B9   U..VW... ..U..VW.
10EA0:  01 01 51 0A C9 75 1E BE  FE 4E BF FE 4E E8 81 00   ..Q..u.. .N..N...
10EB0:  BE 40 0D BF 44 0D E8 78  00 81 3E 24 0D D6 D6 75   .@..D..x ..>$...u
10EC0:  04 FF 16 2A 0D BE 44 0D  BF 44 0D E8 63 00 BE 44   ...*..D. .D..c..D
10ED0:  0D BF 44 0D E8 5A 00 9A  EC 02 AB 10 0B C0 74 11   ..D..Z.. ......t.
10EE0:  58 0A E4 50 75 0B 83 7E  06 00 75 05 C7 46 06 FF   X..Pu..~ ..u..F..
10EF0:  00 E8 10 00 58 0A E4 75  07 8B 46 06 B4 4C CD 21   ....X..u ..F..L.!
10F00:  5F 5E 5D CB 8B 0E 36 0D  E3 07 BB 02 00 FF 1E 34   _^]...6. .......4
10F10:  0D 1E C5 16 9C 08 B8 00  25 CD 21 1F 80 3E DE 08   ........ %.!..>..
10F20:  00 74 0D 1E A0 DF 08 C5  16 E0 08 B4 25 CD 21 1F   .t...... ....%.!.
10F30:  C3 3B F7 73 0E 83 EF 04  8B 05 0B 45 02 74 F2 FF   .;.s.... ...E.t..
10F40:  1D EB EE C3 55 8B EC B8  FC 00 50 0E E8 DE 02 83   ....U... ..P.....
10F50:  3E E6 08 00 74 04 FF 1E  E4 08 B8 FF 00 50 0E E8   >...t... .....P..
10F60:  CB 02 8B E5 5D CB B8 02  00 E9 2B FE 59 5A 8B DC   ....]... ..+.YZ..
10F70:  2B D8 72 0B 3B 1E EC 08  72 05 8B E3 52 51 CB 52   +.r.;... r...RQ.R
10F80:  51 A1 E8 08 40 75 05 33  C0 E9 0B FE FF 2E E8 08   Q...@u.3 ........
10F90:  56 33 F6 B9 42 00 32 E4  FC AC 32 E0 E2 FB 80 F4   V3..B.2. ..2.....
10FA0:  55 74 0F 0E E8 9D FF B8  01 00 50 0E E8 7E 02 B8   Ut...... ..P..~..
10FB0:  01 00 5E CB 8F 06 EE 08  8F 06 F0 08 B4 30 CD 21   ..^..... .....0.!
10FC0:  A3 B2 08 BA 01 00 3C 02  74 29 8E 06 B0 08 26 8E   ......<. t)....&.
10FD0:  06 2C 00 8C 06 D9 08 33  C0 99 B9 00 80 33 FF F2   .,.....3 .....3..
10FE0:  AE AE 75 FB 47 47 89 3E  D7 08 B9 FF FF F2 AE F7   ..u.GG.> ........
10FF0:  D1 8B D1 BF 01 00 BE 81  00 8E 1E B0 08 AC 3C 20   ........ ......<
11000:  74 FB 3C 09 74 F7 3C 0D  74 6F 0A C0 74 6B 47 4E   t.<.t.<. to..tkGN
11010:  AC 3C 20 74 E8 3C 09 74  E4 3C 0D 74 5C 0A C0 74   .< t.<.t .<.t\..t
11020:  58 3C 22 74 24 3C 5C 74  03 42 EB E4 33 C9 41 AC   X<"t$<\t .B..3.A.
11030:  3C 5C 74 FA 3C 22 74 04  03 D1 EB D3 8B C1 D1 E9   <\t.<"t. ........
11040:  13 D1 A8 01 75 CA EB 01  4E AC 3C 0D 74 2B 0A C0   ....u... N.<.t+..
11050:  74 27 3C 22 74 BA 3C 5C  74 03 42 EB EC 33 C9 41   t'<"t.<\ t.B..3.A
11060:  AC 3C 5C 74 FA 3C 22 74  04 03 D1 EB DB 8B C1 D1   .<\t.<"t ........
11070:  E9 13 D1 A8 01 75 D2 EB  97 16 1F 89 3E CD 08 03   .....u.. ....>...
11080:  D7 47 D1 E7 D1 E7 03 D7  42 80 E2 FE 2B E2 8B C4   .G...... B...+...
11090:  A3 CF 08 8C 16 D1 08 8B  D8 03 FB 16 07 36 89 3F   ........ .....6.?
110A0:  36 8C 57 02 83 C3 04 C5  36 D7 08 AC AA 0A C0 75   6.W..... 6......u
110B0:  FA 36 8E 1E B0 08 BE 81  00 EB 03 33 C0 AA AC 3C   .6...... ...3...<
110C0:  20 74 FB 3C 09 74 F7 3C  0D 75 03 E9 84 00 0A C0    t.<.t.< .u......
110D0:  75 03 EB 7E 90 36 89 3F  36 8C 57 02 83 C3 04 4E   u..~.6.? 6.W....N
110E0:  AC 3C 20 74 D6 3C 09 74  D2 3C 0D 74 62 0A C0 74   .< t.<.t .<.tb..t
110F0:  5E 3C 22 74 27 3C 5C 74  03 AA EB E4 33 C9 41 AC   ^<"t'<\t ....3.A.
11100:  3C 5C 74 FA 3C 22 74 06  B0 5C F3 AA EB D1 B0 5C   <\t.<"t. .\.....\
11110:  D1 E9 F3 AA 73 06 B0 22  AA EB C5 4E AC 3C 0D 74   ....s.." ...N.<.t
```

```
11120:  2E 0A C0 74 2A 3C 22 74  B7 3C 5C 74 03 AA EB EC   ...t*<"t .<\t....
11130:  33 C9 41 AC 3C 5C 74 FA  3C 22 74 06 B0 5C F3 AA   3.A.<\t. <"t..\..
11140:  EB D9 B0 5C D1 E9 F3 AA  73 96 B0 22 AA EB CD 33   ...\.... s.."...3
11150:  C0 AA 16 1F C7 07 00 00  C7 47 02 00 00 FF 2E EE   ........ .G......
11160:  08 00 55 8B EC 83 EC 04  1E 8E 06 B0 08 26 8B 1E   ..U..... .....&..
11170:  2C 00 8E C3 8C 46 FE 33  C0 33 F6 33 FF B9 FF FF   ,....F.3 .3.3....
11180:  0B DB 74 0E 26 80 3E 00  00 00 74 06 F2 AE 46 AE   ..t.&.>. ..t...F.
11190:  75 FA 8B C7 40 24 FE 46  8B FE D1 E6 D1 E6 B9 09   u...@$.F ........
111A0:  00 E8 C0 00 52 50 8B C6  E8 B9 00 A3 D3 08 89 16   ....RP.. ........
111B0:  D5 08 89 56 FC 06 1F 8B  CF 8B D8 33 F6 5F 07 49   ...V.... ...3._.I
111C0:  E3 33 8B 04 36 3B 06 8E  08 75 14 51 56 57 06 16   .3..6;.. .u.QVW..
111D0:  07 BF 8E 08 B9 06 00 F3  A7 07 5F 5E 59 74 0B 8E   ........ .._^Yt..
111E0:  5E FC 89 3F 8C 47 02 83  C3 04 8E 5E FE AC AA 0A   ^..?.G.. ...^....
111F0:  C0 75 FA E2 CD 8E 5E FC  89 0F 89 4F 02 1F 8B E5   .u....^. ...O....
11200:  5D CB 55 8B EC 56 57 1E  07 8B 56 06 BE B0 0D AD   ].U..VW. ..V.....
11210:  3B C2 74 10 40 96 74 0C  97 33 C0 B9 FF FF F2 AE   ;.t.@.t. .3......
11220:  8B F7 EB EB 96 5F 5E 8B  E5 5D CA 02 00 55 8B EC   ....._^. .]...U..
11230:  57 FF 76 06 0E E8 CA FF  0B C0 74 20 92 8B FA 33   W.v..... ..t ...3
11240:  C0 B9 FF FF F2 AE F7 D1  49 BB 02 00 81 3E 24 0D   ........ I....>$.
11250:  D6 D6 75 04 FF 16 26 0D  B4 40 CD 21 5F 8B E5 5D   ..u...&. .@.!_..]
11260:  CA 02 00 00 53 06 51 B9  00 04 87 0E 76 0B 51 50   ....S.Q. ....v.QP
11270:  9A 90 22 AB 10 5B 8F 06  76 0B 59 8B DA 0B D8 74   .."..[.. v.Y....t
11280:  03 07 5B C3 8B C1 E9 0E  FB 00 72 15 33 C0 8B E5   ..[..... ..r.3...
11290:  5D CB 73 F8 50 E8 1A 00  58 32 E4 8B E5 5D CB 73   ].s.P... X2...].s
112A0:  07 E8 0E 00 B8 FF FF 99  8B E5 5D CB 32 E4 E8 01   ........ ..].2...
112B0:  00 CB A2 B5 08 0A E4 75  22 80 3E B2 08 03 72 0C   .......u ".>...r.
112C0:  3C 22 73 0C 3C 20 72 04  B0 05 EB 06 3C 13 76 02   <"s.< r. ....<.v.
112D0:  B0 13 BB F2 08 D7 98 A3  AA 08 C3 8A C4 EB F7 00   ........ ........
112E0:  55 8B EC 83 EC 10 57 56  BF FF FF 8B 76 06 F6 44   U.....WV ....v..D
112F0:  0A 40 74 03 E9 A3 00 F6  44 0A 83 75 03 E9 9A 00   .@t..... D..u....
11300:  1E 56 9A 92 0E AB 10 83  C4 04 8B F8 8B DE 81 EB   .V...... ........
11310:  0C 09 8B 87 00 0A 89 46  FA 1E 56 E8 D2 05 83 C4   .......F ..V.....
11320:  04 8A 44 0B 2A E4 50 9A  B8 1D AB 10 83 C4 02 0B   ..D.*.P. ........
11330:  C0 7C 64 83 7E FA 00 74  61 B8 06 09 1E 50 8D 46   .|d.~..t a....P.F
11340:  F0 16 50 9A 9C 25 AB 10  83 C4 08 8D 46 F2 89 46   ..P..%.. ....F..F
11350:  FC 8C 56 FE 80 7E F0 5C  74 14 B8 08 09 1E 50 8D   ..V..~.\ t.....P.
11360:  46 F0 16 50 9A 56 25 AB  10 83 C4 08 EB 03 FF 4E   F..P.V%. .......N
11370:  FC B8 0A 00 50 FF 76 FE  FF 76 FC FF 76 FA 9A D4   ....P.v. .v..v...
11380:  26 AB 10 83 C4 08 8D 46  F0 16 50 9A 12 2F AB 10   &......F ..P../..
11390:  83 C4 04 0B C0 74 03 BF  FF FF C6 44 0A 00 8B C7   .....t.. ...D....
113A0:  5E 5F 8B E5 5D CB 55 8B  EC 83 EC 08 9A A4 1C AB   ^_..].U. ........
113B0:  10 89 56 FE 0B D0 75 06  2B C0 99 EB 19 90 FF 76   ..V...u. +......v
113C0:  FE 50 FF 76 0E FF 76 0C  FF 76 0A FF 76 08 FF 76   .P.v..v. .v..v..v
113D0:  06 9A D0 0C AB 10 8B E5  5D CB 55 8B EC 2B C0 50   ........ ].U..+.P
113E0:  FF 76 0C FF 76 0A FF 76  08 FF 76 06 9A 02 07 AB   .v..v..v ..v.....
113F0:  10 8B E5 5D CB 90 55 8B  EC 83 EC 04 56 57 8B 46   ...]..U. ....VW.F
11400:  0A F7 66 0C 8B C8 0B CA  74 61 89 46 FC 89 56 FE   ..f..... ta.F..V.
11410:  C4 5E 06 8B 76 0E 0B D2  75 1F 3D FF FF 74 1A 8B   .^..v... u.=..t..
11420:  CB 03 C8 72 14 50 53 52  8B C8 E8 6A 00 8B C8 5A   ...r.PSR ...j...Z
11430:  5B 58 2B C1 83 DA 00 EB  3C 83 FB 01 77 05 B9 00   [X+..... <...w...
11440:  80 EB 04 8B CB F7 D9 51  50 53 52 E8 49 00 8B C8   .......Q PSR.I...
11450:  5A 5B 58 5F 2B C1 83 DA  00 3B CF 72 18 03 D9 73   Z[X_+... .;.r...s
11460:  0C 8C C1 81 C1 00 10 8E  C1 EB 02 EB 24 8B C8 0B   ........ ....$...
11470:  CA 75 A3 EB 00 8B C8 0B  CA 74 13 8B 4E FC 2B C8   .u...... .t..N.+.
```

```
11480:  8B C1 8B 4E FE 1B CA 8B  D1 F7 76 0A EB 03 8B 46   ...N.... ..v....F
11490:  0C 5F 5E 8B E5 5D CB 55  8B EC 83 EC 04 89 4E FE   ._^..].U ......N.
114A0:  BF FC 09 8B C6 2D 0C 09  03 F8 F6 44 0A 0C 75 05   .....-.. ...D..u.
114B0:  F6 05 01 74 05 8B 45 02  EB 03 B8 00 02 89 46 FC   ...t..E. ......F.
114C0:  F6 44 0A 0C 75 05 F6 05  01 74 33 8B 44 04 0B C0   .D..u... .t3.D...
114D0:  74 2C 3B C1 76 02 8B C1  50 53 51 06 50 FF 74 02   t,;.v... PSQ.P.t.
114E0:  FF 34 06 53 0E E8 B6 25  83 C4 0A 07 59 5B 58 2B   .4.S...% ....Y[X+
114F0:  C8 29 44 04 03 D8 01 04  EB 00 E3 62 EB C2 3B 4E   .)D..... ...b..;N
11500:  FC 72 30 33 D2 8B C1 F7  76 FC 8B C1 2B C2 53 51   .r03.... v...+.SQ
11510:  06 50 06 53 33 C0 8A 44  0B 50 0E E8 A4 17 83 C4   .P.S3..D .P......
11520:  08 07 59 5B 0B C0 74 2C  3D FF FF 74 2D 2B C8 03   ..Y[..t, =..t-+..
11530:  D8 EB C7 53 51 06 1E 56  0E E8 2C 02 83 C4 04 07   ...SQ..V ..,.....
11540:  59 5B 3D FF FF 74 17 26  88 07 43 49 8B 45 02 89   Y[=..t.& ..CI.E..
11550:  46 FC EB A6 80 4C 0A 10  EB 04 80 4C 0A 20 8B 46   F....L.. ...L. .F
11560:  FE 2B C1 8B E5 5D C3 00  55 8B EC 83 EC 04 56 57   .+...].. U.....VW
11570:  8B 46 0A F7 66 0C 8B C8  0B CA 74 61 89 46 FC 89   .F..f... ..ta.F..
11580:  56 FE C4 5E 06 8B 76 0E  0B D2 75 1F 3D FF FF 74   V..^..v. ..u.=..t
11590:  1A 8B CB 03 C8 72 14 50  53 52 8B C8 E8 6A 00 8B   .....r.P SR...j..
115A0:  C8 5A 5B 58 2B C1 83 DA  00 EB 3C 83 FB 01 77 05   .Z[X+... ..<...w.
115B0:  B9 00 80 EB 04 8B CB F7  D9 51 50 53 52 E8 49 00   ........ .QPSR.I.
115C0:  8B C8 5A 5B 58 5F 2B C1  83 DA 00 3B CF 72 18 03   ..Z[X_+. ...;.r..
115D0:  D9 73 0C 8C C1 81 C1 00  10 8E C1 EB 02 EB 24 8B   .s...... ......$.
115E0:  C8 0B CA 75 A3 EB 00 8B  C8 0B CA 74 13 8B 4E FC   ...u.... ...t..N.
115F0:  2B C8 8B C1 8B 4E FE 1B  CA 8B D1 F7 76 0A EB 03   +....N.. ....v...
11600:  8B 46 0C 5F 5E 8B E5 5D  CB 55 8B EC 83 EC 04 89   .F._^..] .U......
11610:  4E FE BF FC 09 8B C6 2D  0C 09 03 F8 F6 44 0A 0C   N......- .....D..
11620:  75 05 F6 05 01 74 05 8B  45 02 EB 03 B8 00 02 89   u....t.. E.......
11630:  46 FC F6 44 0A 08 75 05  F6 05 01 74 36 8B 44 04   F..D..u. ...t6.D.
11640:  0B C0 74 2F 3B C1 76 02  8B C1 50 53 51 06 50 06   ..t/;.v. ..PSQ.P.
11650:  53 FF 74 02 FF 34 0E E8  44 24 83 C4 0A 07 59 5B   S.t..4.. D$....Y[
11660:  58 2B C8 29 44 04 03 D8  01 04 EB 00 0B C9 75 C2   X+.)D... ......u.
11670:  E9 83 00 3B 4E FC 72 50  F6 44 0A 08 75 05 F6 05   ...;N.rP .D..u...
11680:  01 74 13 53 51 06 1E 56  0E E8 AA 04 83 C4 04 07   .t.SQ..V ........
11690:  59 5B 0B C0 75 60 33 D2  8B C1 F7 76 FC 8B C1 2B   Y[..u`3. ...v...+
116A0:  C2 50 53 51 06 50 06 53  33 C0 8A 44 0B 50 0E E8   .PSQ.P.S 3..D.P..
116B0:  0E 17 83 C4 08 07 59 5B  5A 3D FF FF 74 34 2B C8   ......Y[ Z=..t4+.
116C0:  3B C2 75 2E 03 D8 EB A4  33 C0 26 8A 07 53 51 06   ;.u..... 3.&..SQ.
116D0:  1E 56 50 0E E8 2D 01 83  C4 06 07 59 5B 3D FF FF   .VP..-.. ...Y[=..
116E0:  74 14 43 49 8B 45 02 0B  C0 75 01 40 89 46 FC E9   t.CI.E.. .u.@.F..
116F0:  7A FF 80 4C 0A 20 8B 46  FE 2B C1 8B E5 5D C3 00   z..L. .F .+...]..
11700:  55 8B EC 83 EC 06 57 B8  18 09 1E 50 E8 5D 03 83   U.....W. ...P.]..
11710:  C4 04 8B F8 8D 46 0A 16  50 FF 76 08 FF 76 06 B8   .....F.. P.v..v..
11720:  18 09 1E 50 9A BA 17 AB  10 83 C4 0C 89 46 FA B8   ...P.... .....F..
11730:  18 09 1E 50 57 E8 B5 03  83 C4 06 8B 46 FA 5F 8B   ...PW... ....F._.
11740:  E5 5D CB 90 55 8B EC 83  EC 04 56 8D 46 0A 16 50   .]..U... ..V.F..P
11750:  FF 76 08 FF 76 06 BE 0C  09 1E 56 9A 66 0F AB 10   .v..v... ..V.f...
11760:  83 C4 0C 5E 8B E5 5D CB  55 8B EC 56 57 8B 76 06   ...^..]. U..VW.v.
11770:  8A 44 0A A8 83 74 5F A8  40 75 5B A8 02 75 48 0C   .D...t_. @u[..uH.
11780:  01 88 44 0A 8B FE 81 EF  0C 09 81 C7 FC 09 A8 0C   ..D..... ........
11790:  75 0D F6 05 01 75 08 1E  56 E8 8C 01 83 C4 04 8B   u....u.. V.......
117A0:  44 06 89 04 FF 75 02 FF  74 08 50 33 DB 8A 5C 0B   D....u.. t.P3..\.
117B0:  53 0E E8 0D 15 83 C4 08  0B C0 74 11 3D FF FF 75   S....... ..t.=..u
117C0:  1A 80 4C 0A 20 EB 0A 80  4C 0A 20 EB 09 80 4C 0A   ..L. ... L. ...L.
117D0:  10 C7 44 04 00 00 B8 FF  FF EB 25 8A BF B9 08 80   ..D..... ..%.....
```

```
117E0:  E7 82 80 FF 82 75 0B 8A  7C 0A F6 C7 82 75 03 80   .....u.. |....u..
117F0:  0D 20 48 89 44 04 C4 1C  33 C0 26 8A 07 43 89 1C   . H.D... 3.&..C..
11800:  5F 5E 5D CB 55 8B EC 56  57 8B 76 08 8A 44 0A A8   _^].U..V W.v..D..
11810:  82 74 6A A8 40 75 66 C7  44 04 00 00 A8 01 74 0B   .tj.@uf. D.....t.
11820:  A8 10 74 59 8B 4C 06 89  0C 24 FE 0C 02 24 EF 88   ..tY.L.. .$...$..
11830:  44 0A 8B FE 81 EF 0C 09  81 C7 FC 09 33 DB 8A 5C   D....... ....3..\
11840:  0B A8 08 75 51 A8 04 75  1E F6 05 01 75 48 81 FE   ...uQ..u ....uH..
11850:  18 09 74 0C 81 FE 24 09  74 06 81 FE 3C 09 75 26   ..t...$. t...<.u&
11860:  F6 87 B9 08 40 74 1F B9  01 00 51 16 8D 7E 06 57   ....@t.. ..Q..~.W
11870:  53 0E E8 4B 15 83 C4 08  B9 01 00 EB 46 B8 FF FF   S..K.... ....F...
11880:  80 4C 0A 20 EB 65 53 1E  56 E8 9C 00 83 C4 04 5B   .L. .eS. V......[
11890:  F6 44 0A 08 74 D1 8B 0C  8B 54 06 2B CA 42 89 14   .D..t... .T.+.B..
118A0:  8B 55 02 4A 89 54 04 E3  25 51 51 FF 74 08 FF 74   .U.J.T.. %QQ.t..t
118B0:  06 53 0E E8 0A 15 83 C4  08 59 C4 7C 06 8B 56 06   .S...... .Y.|..V.
118C0:  26 88 15 3B C1 75 B6 33  C0 8A 46 06 EB 1D 33 C0   &..;.u.3 ..F...3.
118D0:  F6 87 B9 08 20 74 E3 B9  02 00 51 50 50 53 0E E8   .... t.. ..QPPS..
118E0:  9A 11 83 C4 08 33 C0 8B  C8 EB CF 5F 5E 5D CB 00   .....3.. ..._^]..
118F0:  55 8B EC 56 8B 76 04 8A  44 0A A8 83 74 26 A8 08   U..V.v.. D...t&..
11900:  74 22 FF 74 08 FF 74 06  9A 96 22 AB 10 83 C4 04   t".t..t. ..".....
11910:  80 64 0A F7 33 C0 89 44  06 89 44 08 89 04 89 44   .d..3..D ..D....D
11920:  02 89 44 04 5E 5D C3 00  55 8B EC 56 8B 76 04 B8   ..D.^].. U..V.v..
11930:  00 02 50 9A 90 22 AB 10  59 8B DE 81 EB 0C 09 81   ..P..".. Y.......
11940:  C3 FC 09 0B D2 74 0B 80  4C 0A 08 C7 47 02 00 02   .....t.. L...G...
11950:  EB 0E 80 4C 0A 04 C7 47  02 01 00 8C DA 8D 47 01   ...L...G ......G.
11960:  89 54 02 89 04 89 54 08  89 44 06 C7 44 04 00 00   .T....T. .D..D...
11970:  5E 5D C3 00 55 8B EC 83  EC 08 57 56 C4 5E 0A 26   ^]..U... ..WV.^.&
11980:  8A 07 98 3D 77 00 74 48  77 08 2C 61 74 4C 2C 11   ...=w.tH w.,atL,.
11990:  74 06 2B C0 99 E9 CD 00  2B F6 C6 46 FC 01 C7 46   t.+..... +..F...F
119A0:  FE 01 00 FF 46 0A C4 5E  0A 26 80 3F 00 74 5B 83   ....F..^ .&.?.t[.
119B0:  7E FE 00 74 55 26 8A 07  98 3D 74 00 74 34 77 08   ~..tU&.. .=t.t4w.
119C0:  2C 2B 74 1C 2C 37 74 36  C7 46 FE 00 00 EB D4 90   ,+t.,7t6 .F......
119D0:  BE 01 03 C6 46 FC 02 EB  C5 90 BE 09 01 EB F4 90   ....F... ........
119E0:  F7 C6 02 00 75 E2 83 CE  02 83 E6 FE C6 46 FC 80   ....u... .....F..
119F0:  EB B1 F7 C6 00 C0 75 D0  81 CE 00 40 EB A5 F7 C6   ......u. ...@....
11A00:  00 C0 75 C4 81 CE 00 80  EB 99 B8 A4 01 50 FF 76   ..u..... .....P.v
11A10:  0E 56 FF 76 08 FF 76 06  9A 52 1E AB 10 83 C4 0A   .V.v..v. .R......
11A20:  89 46 FA 0B C0 7D 03 E9  68 FF FF 06 0A 09 8B 7E   .F...}.. h......~
11A30:  10 8B C7 2D 0C 09 05 FC  09 89 46 F8 8A 46 FC 88   ...-.... ..F..F..
11A40:  45 0A 8B 5E F8 C6 07 00  2B C0 89 45 04 89 47 04   E..^.... +..E..G.
11A50:  89 45 02 89 05 89 45 08  89 45 06 8A 46 FA 88 45   .E....E. .E..F..E
11A60:  0B 8B C7 8C DA 5E 5F 8B  E5 5D CB 90 55 8B EC 56   .....^_. .]..U..V
11A70:  57 8B 76 04 BB F0 0A 81  FE 18 09 74 12 BB F4 0A   W.v..... ...t....
11A80:  81 FE 24 09 74 09 BB F8  0A 81 FE 3C 09 75 58 8B   ..$.t... ...<.uX.
11A90:  FE 81 EF 0C 09 81 C7 FC  09 F6 44 0A 0C 75 48 F6   ........ ..D..uH.
11AA0:  05 01 75 43 8B 07 8B 57  02 8B C8 0B CA 74 21 89   ..uC...W .....t!.
11AB0:  44 06 89 54 08 89 04 89  54 02 C7 44 04 00 02 C7   D..T.... T..D....
11AC0:  45 02 00 02 80 4C 0A 02  C6 05 11 B8 01 00 EB 19   E....L.. ........
11AD0:  53 B8 00 02 50 9A 90 22  AB 10 5B 5B 0B D2 74 07   S...P.." ..[[..t.
11AE0:  89 07 89 57 02 EB C8 33  C0 5F 5E 5D C3 55 8B EC   ...W...3 ._^].U..
11AF0:  56 57 8B 76 06 8B FE 81  EF 0C 09 81 C7 FC 09 F6   VW.v.... ........
11B00:  05 10 74 2D 33 DB 8A 5C  0B F6 87 B9 08 40 74 21   ..t-3..\ .....@t!
11B10:  1E 56 0E E8 20 00 83 C4  04 83 7E 04 00 74 12 33   .V.. ... ..~..t.3
11B20:  C0 88 05 89 45 02 89 04  89 44 02 89 44 06 89 44   ....E... .D..D..D
11B30:  08 5F 5E 5D C3 00 55 8B  EC 83 EC 02 57 56 2B FF   ._^]..U. ....WV+.
```

```
11B40:  8B 46 08 0B 46 06 75 08  2B C0 50 E8 70 00 EB 5F   .F..F.u. +.P.p.._
11B50:  8B 76 06 8A 44 0A 8B C8  24 03 3C 02 75 3F F6 C1   .v..D... $.<.u?..
11B60:  08 75 0D 8B DE 81 EB 0C  09 F6 87 FC 09 01 74 2D   .u...... ......t-
11B70:  8B 04 2B 44 06 89 46 FE  0B C0 7E 21 50 FF 74 08   ..+D..F. ..~!P.t.
11B80:  FF 74 06 8A 4C 0B 2A ED  51 9A 1C 21 AB 10 83 C4   .t..L.*. Q..!....
11B90:  08 39 46 FE 74 07 80 4C  0A 20 BF FF FF 8B 44 06   .9F.t..L . ....D.
11BA0:  8B 54 08 89 04 89 54 02  C7 44 04 00 00 8B C7 5E   .T....T. .D.....^
11BB0:  5F 8B E5 5D CB 90 B8 01  00 50 E8 01 00 CB 55 8B   _..].... .P....U.
11BC0:  EC 83 EC 02 57 56 BE 0C  09 2B FF 89 7E FE EB 08   ....WV.. .+..~...
11BD0:  C7 46 FE FF FF 83 C6 0C  39 36 EC 0A 72 16 F6 44   .F...... 96..r..D
11BE0:  0A 83 74 F1 1E 56 9A 92  0E AB 10 83 C4 04 40 74   ..t..V.. ......@t
11BF0:  DF 47 EB E1 83 7E 04 01  75 04 8B C7 EB 03 8B 46   .G...~.. u......F
11C00:  FE 5E 5F 8B E5 5D C2 02  00 90 55 8B EC B8 B4 01   .^_..].. ..U.....
11C10:  9A C8 02 AB 10 57 56 C6  46 B8 00 2B C0 89 46 E8   .....WV. F..+..F.
11C20:  89 46 C6 C4 5E 0A 26 80  3F 00 75 03 E9 6F 07 26   .F..^.&. ?.u..o.&
11C30:  8A 1F 2A FF F6 87 97 0B  08 74 2D FF 4E E8 8D 46   ..*..... .t-.N..F
11C40:  E8 16 50 FF 76 08 FF 76  06 E8 DE 07 50 FF 76 08   ..P.v..v ....P.v.
11C50:  FF 76 06 E8 B6 07 FF 46  0A C4 5E 0A 26 8A 1F 2A   .v.....F ..^.&..*
11C60:  FF F6 87 97 0B 08 75 EE  8B 5E 0A 26 80 3F 25 74   ......u. .^.&.?%t
11C70:  03 E9 02 07 C6 46 C0 00  2A C0 88 46 FC 88 46 B6   .....F.. *..F..F.
11C80:  88 46 F2 88 46 F6 88 46  EE 88 86 52 FE 2B C0 89   .F..F..F ...R.+..
11C90:  46 EA 89 46 BA 89 46 FE  89 46 C4 89 46 C2 EB 68   F..F..F. .F..F..h
11CA0:  90 90 FF 46 0A C4 5E 0A  26 8A 07 2A E4 8B F8 F6   ...F..^. &..*....
11CB0:  85 97 0B 04 74 1A FF 46  BA 8B 46 FE 8B C8 D1 E0   ....t..F ..F.....
11CC0:  D1 E0 03 C1 D1 E0 03 C7  2D 30 00 89 46 FE EB 38   ........ -0..F..8
11CD0:  3D 6C 00 74 1C 77 2D 3C  4C 74 13 7F 1F 2C 2A 74   =l.t.w-< Lt...,*t
11CE0:  15 2C 1C 74 23 EB 1D 90  FE 46 FC EB 1B 90 FE 46   .,.t#... .F.....F
11CF0:  F6 FE 46 F6 EB 12 FE 46  EE EB 0D 90 2C 4E 74 08   ..F....F ....,Nt.
11D00:  2C 1A 74 E4 FE 86 52 FE  80 BE 52 FE 00 74 93 80   ,.t...R. ..R..t..
11D10:  7E EE 00 75 14 C4 5E 0E  83 46 0E 04 26 8B 07 26   ~..u..^. .F..&..&
11D20:  8B 57 02 89 46 F8 89 56  FA C6 86 52 FE 00 C4 5E   .W..F..V ...R...^
11D30:  0A 26 8A 07 0C 20 2A E4  8B F8 83 FF 6E 74 29 83   .&... *. ....nt).
11D40:  FF 63 74 16 83 FF 7B 74  11 8D 46 E8 16 50 FF 76   .ct...{t ..F..P.v
11D50:  08 FF 76 06 E8 D3 06 EB  0D 90 FF 46 E8 FF 76 08   ..v..... ...F..v.
11D60:  FF 76 06 E8 74 06 8B F0  83 7E BA 00 74 09 83 7E   .v..t... .~..t..~
11D70:  FE 00 75 03 E9 93 05 8B  C7 E9 B0 05 83 7E BA 00   ..u..... .....~..
11D80:  75 06 FF 46 BA FF 46 FE  C7 46 BC 02 0B 8C 5E BE   u..F..F. .F....^.
11D90:  EB 23 C7 46 BC FC 0A EB  F4 90 FF 46 0A C4 5E 0A   .#.F.... ...F..^.
11DA0:  89 5E BC 8C 46 BE 26 80  3F 5E 75 0C 8D 47 01 89   .^..F.&. ?^u..G..
11DB0:  46 BC 8C 46 BE FE 4E B6  B8 20 00 50 2B C0 50 8D   F..F..N. . .P+.P.
11DC0:  46 C8 16 50 9A 58 2E AB  10 83 C4 08 83 FF 7B 74   F..P.X.. ......{t
11DD0:  03 E9 B3 00 C4 5E BC 26  80 3F 5D 74 03 E9 A7 00   .....^.& .?]t....
11DE0:  C6 46 C0 5D FF 46 BC C6  46 D3 20 E9 99 00 26 8A   .F.].F.. F. ...&.
11DF0:  07 88 46 F4 FF 46 BC 3C  2D 75 0F 80 7E C0 00 74   ..F..F.< -u..~..t
11E00:  09 8B 5E BC 26 80 3F 5D  75 24 8A 5E F4 88 5E C0   ..^.&.?] u$.^..^.
11E10:  B0 01 8A CB 80 E1 07 8B  D1 8A CA D2 E0 B1 03 D2   ........ ........
11E20:  EB 2A FF 8D 4E C8 03 D9  36 08 07 EB 5A 90 FF 46   .*..N... 6...Z..F
11E30:  BC 26 8A 07 88 46 F4 3A  46 C0 76 06 88 46 F0 EB   .&...F.: F.v..F..
11E40:  0D 90 8A 46 C0 88 46 F0  8A 46 F4 88 46 C0 8A 46   ...F..F. .F..F..F
11E50:  C0 88 46 F4 EB 21 8A 5E  F4 B0 01 8A CB 80 E1 07   ..F..!.^ ........
11E60:  8B D1 8A CA D2 E0 B1 03  D2 EB 2A FF 8D 4E C8 03   ........ ..*..N..
11E70:  D9 36 08 07 FE 46 F4 8A  46 F0 98 8A 4E F4 2A ED   .6...F.. F...N.*.
11E80:  3B C1 7D D2 88 6E C0 C4  5E BC 26 80 3F 5D 74 03   ;.}..n.. ^.&.?]t.
11E90:  E9 5B FF 26 80 3F 00 75  03 E9 02 05 83 FF 7B 75   .[.&.?.u ......{u
```

```
11EA0:  0A 8B C3 8C C2 89 46 0A  89 56 0C 8B 46 F8 8B 56   ......F. .V..F..V
11EB0:  FA 89 86 54 FE 89 96 56  FE 83 7E BA 00 74 0A 8B   ...T...V ..~..t..
11EC0:  46 FE FF 4E FE 0B C0 74  4F 83 FE FF 74 4A 8B DE   F..N...t O...tJ..
11ED0:  B1 03 D3 FB 8D 46 C8 03  D8 36 8A 07 32 46 B6 98   .....F.. .6..2F..
11EE0:  BA 01 00 8B CE 8B D9 80  E1 07 D3 E2 85 C2 74 28   ........ ......t(
11EF0:  80 7E EE 00 75 0E 8B C6  C4 5E F8 FF 46 F8 26 88   .~..u... .^..F.&.
11F00:  07 EB 05 90 FF 86 54 FE  FF 46 E8 FF 76 08 FF 76   ......T. .F..v..v
11F10:  06 E8 C6 04 8B F0 EB A1  FF 4E E8 56 FF 76 08 FF   ........ .N.V.v..
11F20:  76 06 E8 E7 04 8B 46 F8  8B 56 FA 39 86 54 FE 75   v.....F. .V.9.T.u
11F30:  09 39 96 56 FE 75 03 E9  64 04 80 7E EE 00 74 03   .9.V.u.. d..~..t.
11F40:  E9 2B 04 FF 46 C6 83 FF  63 75 03 E9 20 04 8E C2   .+..F... cu.. ...
11F50:  8B D8 26 C6 07 00 E9 15  04 90 BF 64 00 83 FE 2D   ..&..... ...d...-
11F60:  75 06 FE 46 F2 EB 06 90  83 FE 2B 75 1F FF 4E FE   u..F.... ..+u..N.
11F70:  75 0C 83 7E BA 00 74 06  FE 86 52 FE EB 0E FF 46   u..~..t. ..R....F
11F80:  E8 FF 76 08 FF 76 06 E8  50 04 8B F0 83 FE 30 74   ..v..v.. P.....0t
11F90:  03 E9 57 01 FF 46 E8 FF  76 08 FF 76 06 E8 3A 04   ..W..F.. v..v..:.
11FA0:  8B F0 3C 78 74 04 3C 58  75 14 FF 46 E8 FF 76 08   ..<xt.<X u..F..v.
11FB0:  FF 76 06 E8 24 04 8B F0  BF 78 00 E9 2D 01 FF 46   .v..$... .x..-..F
11FC0:  EA 83 FF 78 74 06 BF 6F  00 E9 1F 01 FF 4E E8 56   ...xt..o .....N.V
11FD0:  FF 76 08 FF 76 06 E8 33  04 BE 30 00 E9 0C 01 90   .v..v..3 ..0.....
11FE0:  80 7E FC 00 75 06 FE 46  F6 BF 46 00 83 FE 2D 75   .~..u..F ..F...-u
11FF0:  05 FE 46 F2 EB 08 83 FE  2B 74 03 E9 ED 00 FF 4E   ..F..... +t.....N
12000:  FE 74 03 E9 95 00 83 7E  BA 00 75 03 E9 8C 00 FE   .t.....~ ..u.....
12010:  86 52 FE E9 D5 00 83 FF  78 74 0D 83 FF 70 74 08   .R...... xt...pt.
12020:  83 FF 46 74 03 E9 84 00  F6 84 97 0B 80 74 15 B0   ..Ft.... .....t..
12030:  04 50 8D 46 C2 16 50 9A  BA 2F AB 10 56 E8 7C 03   .P.F..P. ./..V.|.
12040:  8B F0 EB 35 83 FF 46 75  2C 83 7E EA 00 74 26 83   ...5..Fu ,.~..t&.
12050:  FE 3A 75 1C 8B 46 C2 89  46 EC 2B C0 89 46 C4 89   .:u..F.. F.+..F..
12060:  46 C2 C7 46 EA FF FF BF  70 00 BE 30 00 EB 0A 90   F..F.... p..0....
12070:  C7 46 EA 00 00 FE 86 52  FE 80 BE 52 FE 00 75 5E   .F.....R ...R..u^
12080:  FF 46 EA 8D 44 D0 99 01  46 C2 11 56 C4 83 7E BA   .F..D... F..V..~.
12090:  00 74 08 FF 4E FE 75 03  E9 74 FF FF 46 E8 FF 76   .t..N.u. .t..F..v
120A0:  08 FF 76 06 E8 33 03 8B  F0 EB 40 90 F6 84 97 0B   ..v..3.. ..@.....
120B0:  04 74 C2 83 FF 6F 75 14  83 FE 38 7D B8 B0 03 50   .t...ou. ..8}...P
120C0:  8D 46 C2 16 50 9A BA 2F  AB 10 EB AD B8 0A 00 99   .F..P../ ........
120D0:  52 50 8D 46 C2 16 50 9A  98 2F AB 10 EB 9B FF 4E   RP.F..P. ./.....N
120E0:  E8 56 FF 76 08 FF 76 06  E8 21 03 80 BE 52 FE 00   .V.v..v. .!...R..
120F0:  75 03 E9 21 FF 83 FF 70  75 0F 80 7E F6 00 74 09   u..!...p u..~..t.
12100:  8B 46 EC 8B 4E C2 89 46  C4 80 7E F2 00 74 0A F7   .F..N..F ..~..t..
12110:  5E C2 83 56 C4 00 F7 5E  C4 83 FF 46 75 05 C7 46   ^..V...^ ...Fu..F
12120:  EA 00 00 83 7E EA 00 75  03 E9 72 02 80 7E EE 00   ....~..u ..r..~..
12130:  74 03 E9 39 02 FF 46 C6  80 7E F6 00 74 14 8B 46   t..9..F. .~..t..F
12140:  C2 8B 56 C4 C4 5E F8 26  89 07 26 89 57 02 E9 1D   ..V..^.& ..&.W...
12150:  02 90 8B 46 C2 C4 5E F8  26 89 07 E9 10 02 8B 46   ...F..^. &......F
12160:  E8 99 89 46 C2 89 56 C4  EB CE 8D 86 58 FE 89 46   ...F..V. ....X..F
12170:  BC 8C 56 BE 83 FE 2D 75  13 8B D8 36 C6 07 2D 8D   ..V...-u ...6..-.
12180:  86 59 FE 89 46 BC 8C 56  BE EB 06 90 83 FE 2B 75   .Y..F..V ......+u
12190:  11 FF 4E FE FF 46 E8 FF  76 08 FF 76 06 E8 3A 02   ..N..F.. v..v..:.
121A0:  8B F0 83 7E BA 00 74 07  81 7E FE 5D 01 7E 2D C7   ...~..t. .~.].~-.
121B0:  46 FE 5D 01 EB 26 8B 46  FE FF 4E FE 0B C0 74 23   F.]..&.F ..N...t#
121C0:  FF 46 EA 8B C6 C4 5E BC  FF 46 BC 26 88 07 FF 46   .F....^. .F.&...F
121D0:  E8 FF 76 08 FF 76 06 E8  00 02 8B F0 F6 84 97 0B   ..v..v.. ........
121E0:  04 75 D3 83 FE 2E 75 43  8B 46 FE FF 4E FE 0B C0   .u....uC .F..N...
121F0:  74 39 C4 5E BC FF 46 BC  26 C6 07 2E EB 18 8B 46   t9.^..F. &......F
```

```
12200:  FE FF 4E FE 0B C0 74 23  FF 46 EA 8B C6 C4 5E BC   ..N...t# .F....^.
12210:  FF 46 BC 26 88 07 FF 46  E8 FF 76 08 FF 76 06 E8   .F.&...F ..v..v..
12220:  B8 01 8B F0 F6 84 97 0B  04 75 D3 83 7E EA 00 75   ........ .u..~..u
12230:  03 E9 81 00 8B C6 3C 65  74 04 3C 45 75 77 8B 46   ......<e t.<Euw.F
12240:  FE FF 4E FE 0B C0 74 6D  C4 5E BC FF 46 BC 26 C6   ..N...tm .^..F.&.
12250:  07 65 FF 46 E8 FF 76 08  FF 76 06 E8 7C 01 8B F0   .e.F..v. .v..|...
12260:  83 FE 2D 75 0F C4 5E BC  FF 46 BC 26 C6 07 2D EB   ..-u..^. .F.&..-.
12270:  08 90 90 90 83 FE 2B 75  35 8B 46 FE FF 4E FE 0B   ......+u 5.F..N..
12280:  C0 75 1D FF 46 FE EB 26  8B 46 FE FF 4E FE 0B C0   .u..F..& .F..N...
12290:  74 23 FF 46 EA 8B C6 C4  5E BC FF 46 BC 26 88 07   t#.F.... ^..F.&..
122A0:  FF 46 E8 FF 76 08 FF 76  06 E8 2E 01 8B F0 F6 84   .F..v..v ........
122B0:  97 0B 04 75 D3 FF 4E E8  56 FF 76 08 FF 76 06 E8   ...u..N. V.v..v..
122C0:  4A 01 83 7E EA 00 75 03  E9 D3 00 80 7E EE 00 74   J..~..u. ....~..t
122D0:  03 E9 9A 00 FF 46 C6 C4  5E BC 26 C6 07 00 8D 86   .....F.. ^.&.....
122E0:  58 FE 16 50 FF 76 FA FF  76 F8 8A 46 F6 98 50 8E   X..P.v.. v..F..P.
122F0:  06 A6 0D 26 FF 1E 80 0B  83 C4 0A EB 71 90 C4 5E   ...&.... ....q..^
12300:  0A 26 8A 07 2A E4 3B C6  74 12 FF 4E E8 56 FF 76   .&..*.;. t..N.V.v
12310:  08 FF 76 06 E8 F5 00 E9  84 00 90 90 FE 4E B8 80   ..v..... .....N..
12320:  7E EE 00 75 49 83 6E 0E  04 EB 43 90 2D 63 00 3D   ~..uI.n. ..C.-c.=
12330:  18 00 77 CA D1 E0 93 2E  FF A7 98 16 D8 10 48 13   ..w..... ......H.
12340:  C6 14 C6 14 C6 14 5A 16  B6 12 5A 16 5A 16 5A 16   ......Z. ..Z.Z.Z.
12350:  5A 16 BA 14 48 13 3C 13  5A 16 5A 16 EE 10 5A 16   Z...H.<. Z.Z...Z.
12360:  48 13 5A 16 5A 16 B9 12  5A 16 5A 16 F6 10 FE 46   H.Z.Z... Z.Z....F
12370:  B8 FF 46 0A EB 20 FF 46  E8 FF 76 08 FF 76 06 E8   ..F.. .F ..v..v..
12380:  58 00 8B F0 C4 5E 0A FF  46 0A 26 8A 07 2A E4 3B   X....^.. F.&..*.;
12390:  F0 74 03 E9 74 FF 83 FE  FF 74 03 E9 85 F8 83 FE   .t..t... .t......
123A0:  FF 75 0C 83 7E C6 00 75  06 80 7E B8 00 74 05 8B   .u..~..u ..~..t..
123B0:  46 C6 EB 02 8B C6 5E 5F  8B E5 5D CB 55 8B EC 8B   F.....^_ ..].U...
123C0:  5E 04 F6 87 97 0B 04 74  05 8B C3 EB 08 90 8B C3   ^......t ........
123D0:  24 DF 2D 07 00 5D C2 02  00 90 55 8B EC 83 EC 04   $.-..].. ..U.....
123E0:  C4 5E 04 26 FF 4F 04 78  15 26 8B 07 26 8B 57 02   .^.&.O.x .&..&.W.
123F0:  26 FF 07 8B D8 8E C2 26  8A 07 2A E4 EB 07 06 53   &......& ..*....S
12400:  9A C4 0A AB 10 8B E5 5D  C2 04 00 90 55 8B EC 83   .......] ....U...
12410:  7E 08 FF 74 0E FF 76 06  FF 76 04 FF 76 08 9A 4C   ~..t..v. .v..v..L
12420:  1D AB 10 8B E5 5D C2 06  00 90 55 8B EC 56 C4 5E   .....].. ..U..V.^
12430:  08 26 FF 07 FF 76 06 FF  76 04 E8 9D FF 8B F0 F6   .&...v.. v.......
12440:  84 97 0B 08 75 E8 5E 8B  E5 5D C2 08 00 90 12 18   ....u.^. .]......
12450:  1D 18 33 18 67 18 93 18  9B 18 C4 18 F6 18 55 8B   ..3.g... ......U.
12460:  EC B8 71 01 0E E8 04 EB  56 57 33 C0 89 46 F8 88   ..q..... VW3..F..
12470:  46 FB C4 76 0A 26 AC 89  76 0A 88 46 FE 0A C0 74   F..v.&.. v..F...t
12480:  06 83 7E F8 00 7D 06 8B  46 F8 E9 B5 04 BB 04 0B   ..~..}.. F.......
12490:  2C 20 3C 58 77 05 D7 24  0F EB 02 B0 00 B1 03 D2   , <Xw..$ ........
124A0:  E0 02 46 FB D7 FE C1 D2  E8 88 46 FB 98 8B D8 D1   ..F..... ..F.....
124B0:  E3 2E FF A7 AA 17 8A 56  FE B9 01 00 E8 36 04 EB   .......V .....6..
124C0:  B1 33 C0 89 46 F0 89 46  F6 89 46 EE C7 46 FC 20   .3..F..F ..F..F.
124D0:  00 48 89 46 F4 EB 9B 8A  46 FE 3C 2D 75 06 80 4E   .H.F.... F.<-u..N
124E0:  FC 04 EB 8E 3C 2B 75 06  80 4E FC 01 EB 84 3C 20   ....<+u. .N....<
124F0:  75 07 80 4E FC 02 E9 79  FF 3C 23 75 07 80 4E FC   u..N...y .<#u..N.
12500:  80 E9 6E FF 80 4E FC 08  E9 67 FF 8A 4E FE 80 F9   ..n..N.. .g..N...
12510:  2A 75 0F E8 5C 03 0B C0  79 17 F7 D8 80 4E FC 04   *u..\... y....N..
12520:  EB 0F 80 E9 30 32 ED 8B  46 F6 BB 0A 00 F7 E3 03   ....02.. F.......
12530:  C1 89 46 F6 E9 3B FF C7  46 F4 00 00 E9 33 FF 8A   ..F..;.. F....3..
12540:  4E FE 80 F9 2A 75 0C E8  28 03 0B C0 79 14 B8 FF   N...*u.. (...y...
12550:  FF EB 0F 80 E9 30 32 ED  8B 46 F4 BB 0A 00 F7 E3   .....02. .F......
```

```
12560:  03 C1 89 46 F4 E9 0A FF  8A 46 FE 3C 6C 75 06 80   ...F.... .F.<lu..
12570:  4E FC 10 EB 22 3C 46 75  06 80 4E FC 20 EB 18 3C   N..."<Fu ..N. ..<
12580:  4E 75 06 80 4E FD 10 EB  0E 3C 4C 75 06 80 4E FD   Nu..N... .<Lu..N.
12590:  04 EB 04 80 4E FD 08 E9  D8 FE 8A 46 FE 3C 64 75   ....N... ...F.<du
125A0:  03 E9 94 01 3C 69 75 03  E9 8D 01 3C 75 75 03 E9   ....<iu. ...<uu..
125B0:  8A 01 3C 58 75 03 E9 89  01 3C 78 75 03 E9 88 01   ..<Xu... .<xu....
125C0:  3C 6F 75 03 E9 A2 01 3C  63 74 1A 3C 73 74 27 3C   <ou....< ct.<st'<
125D0:  6E 74 51 3C 70 74 60 3C  45 74 07 3C 47 74 03 E9   ntQ<pt`< Et.<Gt..
125E0:  BB 00 E9 B5 00 E8 8A 02  8D BE 8F FE 16 07 AA 4F   ........ .......O
125F0:  B9 01 00 E9 F1 01 E8 90  02 0B FF 75 12 8C C0 0B   ........ ...u....
12600:  C0 75 0C 1E 07 BF 5D 0B  8B 0E 63 0B E9 D8 01 57   .u....]. ..c....W
12610:  8B 4E F4 E3 07 32 C0 F2  AE 75 01 4F 59 2B F9 87   .N...2.. .u.OY+..
12620:  CF E9 C3 01 E8 62 02 8B  46 F8 AB F6 46 FC 10 74   .....b.. F...F..t
12630:  03 33 C0 AB E9 3B FE F6  46 FC 30 75 05 E8 32 02   .3...;.. F.0u..2.
12640:  EB 39 E8 36 02 F6 46 FD  18 75 30 C6 46 FF 07 B9   .9.6..F. .u0.F...
12650:  10 00 16 07 52 33 D2 8D  BE 97 FE BE 04 00 E8 B0   ....R3.. ........
12660:  02 B9 10 00 8D BE 92 FE  58 33 D2 BE 04 00 E8 A0   ........ X3......
12670:  02 C6 86 93 FE 3A B9 09  00 EB 18 C6 46 FF 07 B9   .....:.. ....F...
12680:  10 00 16 07 33 D2 8D BE  92 FE BE 04 00 E8 81 02   ....3... ........
12690:  B9 04 00 8D BE 8F FE E9  4D 01 FF 46 EE 80 4E FC   ........ M..F..N.
126A0:  40 8A 46 FE 0C 20 98 8B  F0 83 7E F4 00 7F 13 74   @.F.. .. ..~....t
126B0:  07 C7 46 F4 06 00 EB 0A  3D 67 00 75 05 C7 46 F4   ..F..... =g.u..F.
126C0:  01 00 8D BE 8F FE FF 76  EE FF 76 F4 56 16 57 FF   .......v ..v.V.W.
126D0:  76 10 FF 76 0E F6 46 FD  04 74 0A FF 1E 8C 0B 83   v..v..F. .t......
126E0:  46 0E 0A EB 08 FF 1E 78  0B 83 46 0E 08 83 C4 0E   F......x ..F.....
126F0:  F6 46 FC 80 74 0F 83 7E  F4 00 75 09 16 57 FF 1E   .F..t..~ ..u..W..
12700:  84 0B 83 C4 04 83 FE 67  75 10 F7 46 FC 80 00 75   .......g u..F...u
12710:  09 16 57 FF 1E 7C 0B 83  C4 04 16 07 26 80 3D 2D   ..W..|.. ....&.=-
12720:  75 05 47 80 4E FD 01 B9  FF FF 57 B0 00 F2 AE 4F   u.G.N... ..W....O
12730:  59 2B F9 87 CF E9 AF 00  80 4E FC 40 C6 46 FA 0A   Y+...... .N.@.F..
12740:  EB 35 C6 46 FF 07 EB 04  C6 46 FF 27 F6 46 FC 80   .5.F.... .F.'.F..
12750:  74 11 C7 46 F0 02 00 C6  46 F2 30 B2 51 02 56 FF   t..F.... F.0.Q.V.
12760:  88 56 F3 C6 46 FA 10 EB  0E F6 46 FC 80 74 04 80   .V..F... ..F..t..
12770:  4E FD 02 C6 46 FA 08 F6  46 FC 10 74 05 E8 FB 00   N...F... F..t....
12780:  EB 0E E8 ED 00 F6 46 FC  40 74 03 99 EB 02 33 D2   ......F. @t....3.
12790:  F6 46 FC 40 74 0F 0B D2  7D 0B 80 4E FD 01 F7 D8   .F.@t... }..N....
127A0:  83 D2 00 F7 DA 83 7E F4  00 7D 07 C7 46 F4 01 00   ......~. .}..F...
127B0:  EB 04 80 66 FC F7 8B D8  0B DA 75 05 C7 46 F0 00   ...f.... ..u..F..
127C0:  00 8D 7E EB 16 07 8A 4E  FA 32 ED 8B 76 F4 E8 40   ..~....N .2..v..@
127D0:  01 F6 46 FD 02 74 0E E3  06 26 80 3D 30 74 06 4F   ..F..t.. .&.=0t.O
127E0:  26 C6 05 30 41 EB 00 F6  46 FC 40 74 31 F6 46 FD   &..0A... F.@t1.F.
127F0:  01 74 0B C6 46 F2 2D C7  46 F0 01 00 EB 20 F6 46   .t..F.-. F.... .F
12800:  FC 01 74 0B C6 46 F2 2B  C7 46 F0 01 00 EB 0F F6   ..t..F.+ .F......
12810:  46 FC 02 74 09 C6 46 F2  20 C7 46 F0 01 00 8B 46   F..t..F.  .F....F
12820:  F6 2B C1 2B 46 F0 7D 02  33 C0 06 57 51 F6 46 FC   .+.+F.}. 3..WQ.F.
12830:  0C 75 07 8B C8 B2 20 E8  BB 00 50 16 07 8D 7E F2   .u.... . ..P...~.
12840:  8B 4E F0 E8 91 00 58 F6  46 FC 08 74 0D F6 46 FC   .N....X. F..t..F.
12850:  04 75 07 8B C8 B2 30 E8  9B 00 59 5F 07 50 E8 76   .u....0. ..Y_.P.v
12860:  00 58 F6 46 FC 04 74 07  8B C8 B2 20 E8 86 00 E9   .X.F..t. ... ....
12870:  00 FC C4 76 0E 26 AD 89  76 0E C3 C4 76 0E 26 AD   ...v.&.. v...v.&.
12880:  8B D0 26 AD 92 89 76 0E  C3 F6 46 FC 20 74 08 E8   ..&...v. ..F. t..
12890:  E9 FF 8E C2 8B F8 C3 E8  D8 FF 8B F8 0B C0 75 03   ........ ......u.
128A0:  8E C0 C3 1E 07 C3 98 06  57 C4 5E 06 26 FF 4F 04   ........ W.^.&.O.
128B0:  78 10 26 8B 3F 26 FF 07  26 8E 47 02 AA 33 C0 5F   x.&.?&.. &.G..3._
```

```
128C0:  07 C3 51 52 06 53 50 0E  E8 39 EF 83 C4 06 5A 59   ..QR.SP. .9....ZY
128D0:  3D FF FF 75 E8 EB E8 E3  1B 8B F7 01 4E F8 57 33   =..u.... ....N.W3
128E0:  FF 26 AC E8 C0 FF 0B F8  E2 F7 0B FF 5F 74 05 C7   .&...... ...._t..
128F0:  46 F8 FF FF C3 E3 19 01  4E F8 57 33 FF 8A C2 E8   F....... N.W3....
12900:  A4 FF 0B F8 E2 F7 0B FF  5F 74 05 C7 46 F8 FF FF   ........ _t..F...
12910:  C3 FD 57 93 0B F6 7F 0A  0B DB 75 06 0B D2 75 02   ..W..... ..u...u.
12920:  EB 1A 92 33 D2 F7 F1 93  F7 F1 92 87 D3 04 30 3C   ...3.... ......0<
12930:  39 76 03 02 46 FF AA 8B  C2 4E EB D8 59 2B CF 47   9v..F... .N..Y+.G
12940:  FC C3 5F 5E 8B E5 5D CB  55 8B EC 83 EC 04 56 BE   .._^..]. U.....V.
12950:  0C 09 2B C0 89 46 FE 89  46 FC EB 03 83 C6 0C 39   ..+..F.. F......9
12960:  36 EC 0A 72 26 F6 44 0A  83 75 F1 C7 44 04 00 00   6..r&.D. .u..D...
12970:  C6 44 0A 00 2B C0 89 44  08 89 44 06 89 44 02 89   .D..+..D ..D..D..
12980:  04 C6 44 0B FF 89 76 FC  8C 5E FE 8B 46 FC 8B 56   ..D...v. .^..F..V
12990:  FE 5E 8B E5 5D CB 55 8B  EC BB 18 09 EB 06 55 8B   .^..].U. ......U.
129A0:  EC 8B 5E 08 FF 4F 04 78  0F FF 07 C4 1F 8A 46 06   ..^..O.x ......F.
129B0:  26 88 47 FF 32 E4 EB 0C  1E 53 FF 76 06 0E E8 43   &.G.2... .S.v...C
129C0:  EE 83 C4 06 5D CB 55 8B  EC BB 0C 09 EB 06 55 8B   ....].U. ......U.
129D0:  EC 8B 5E 06 FF 4F 04 78  0C FF 07 C4 1F 26 8A 47   ..^..O.x .....&.G
129E0:  FF 32 E4 EB 08 1E 53 0E  E8 7D ED 5B 5B 5D CB 00   .2....S. .}.[[]..
129F0:  55 8B EC 57 56 8B 76 06  8B 7E 08 83 FE FF 74 12   U..WV.v. .~....t.
12A00:  F6 45 0A 01 75 12 F6 45  0A 80 74 06 F6 45 0A 02   .E..u..E ..t..E..
12A10:  74 06 B8 FF FF EB 3E 90  8B 45 08 0B 45 06 75 08   t.....>. .E..E.u.
12A20:  1E 57 E8 03 EF 83 C4 04  8B 05 8B 55 02 39 45 06   .W...... ...U.9E.
12A30:  75 0D 39 55 08 75 08 83  7D 04 00 75 D5 FF 05 FF   u.9U.u.. }..u....
12A40:  45 04 8B C6 FF 0D C4 1D  26 88 07 80 65 0A EF 80   E....... &...e...
12A50:  4D 0A 01 2A E4 5E 5F 8B  E5 5D CB 90 55 8B EC 8B   M..*.^_. .]..U...
12A60:  5E 06 3B 1E B7 08 72 06  B8 00 09 F9 EB 0B B4 3E   ^.;...r. .......>
12A70:  CD 21 72 05 C6 87 B9 08  00 E9 0E E8 55 8B EC 83   .!r..... ....U...
12A80:  EC 04 8B 5E 06 3B 1E B7  08 72 05 B8 00 09 EB 2A   ...^.;.. .r.....*
12A90:  F7 46 0A 00 80 74 48 83  7E 0C 00 74 1A 33 C9 8B   .F...tH. ~..t.3..
12AA0:  D1 B8 01 42 CD 21 72 4B  F7 46 0C 02 00 75 0E 03   ...B.!rK .F...u..
12AB0:  46 08 13 56 0A 79 28 B8  00 16 F9 EB 36 89 56 FE   F..V.y(. ....6.V.
12AC0:  89 46 FC 8B D1 B8 02 42  CD 21 03 46 08 13 56 0A   .F.....B .!.F..V.
12AD0:  79 0D 8B 4E FE 8B 56 FC  B8 00 42 CD 21 EB D8 8B   y..N..V. ..B.!...
12AE0:  56 08 8B 4E 0A 8A 46 0C  B4 42 CD 21 72 05 80 A7   V..N..F. .B.!r...
12AF0:  B9 08 FD E9 A9 E7 55 8B  EC 83 EC 04 32 FF 80 3E   ......U. ....2..>
12B00:  B2 08 03 72 03 8A 7E 0C  8B 46 0E 89 46 0C EB 08   ...r..~. .F..F...
12B10:  55 8B EC 83 EC 04 32 FF  88 7E FE 8B 46 0A 8B C8   U.....2. .~..F...
12B20:  C6 46 FC 00 A9 00 80 75  10 A9 00 40 75 07 F6 06   .F.....u ...@u...
12B30:  67 0B 80 75 04 C6 46 FC  80 1E C5 56 06 24 03 0A   g..u..F. ...V.$..
12B40:  C7 B4 3D CD 21 1F 73 12  3D 02 00 75 09 F7 C1 00   ..=.!.s. =..u....
12B50:  01 74 03 E9 A5 00 F9 E9  45 E7 93 8B C1 25 00 05   .t...... E....%..
12B60:  3D 00 05 75 09 B4 3E CD  21 B8 00 11 EB E8 C6 46   =..u..>. !......F
12B70:  FD 01 B8 00 44 CD 21 F6  C2 80 74 04 80 4E FC 40   ....D.!. ..t..N.@
12B80:  F6 46 FC 40 74 03 E9 DF  00 8B 46 0A A9 00 02 74   .F.@t... ..F....t
12B90:  1E A9 03 00 74 09 33 C9  B4 40 CD 21 E9 C9 00 B4   ....t.3. .@.!....
12BA0:  3E CD 21 1E C5 56 06 B8  00 43 CD 21 1F EB 69 F6   >.!..V.. .C.!..i.
12BB0:  46 FC 80 75 03 E9 B0 00  A9 02 00 75 03 E9 A8 00   F..u.... ...u....
12BC0:  B9 FF FF 8B D1 B8 02 42  CD 21 F7 D9 1E 16 1F 8D   .......B .!......
12BD0:  56 FF B4 3F CD 21 1F 0B  C0 74 15 80 7E FF 1A 75   V..?.!.. .t..~..u
12BE0:  0F F7 D9 8B D1 B8 02 42  CD 21 33 C9 B4 40 CD 21   .......B .!3..@.!
12BF0:  33 C9 8B D1 B8 00 42 CD  21 EB 6D C6 46 FD 00 8B   3.....B. !.m.F...
12C00:  4E 0C E8 AC 00 89 4E 0C  F6 46 FE FF 75 07 F7 46   N.....N. .F..u..F
12C10:  0A 02 00 75 03 80 E1 FE  1E C5 56 06 B4 3C CD 21   ...u.... ..V..<.!
```

```
12C20:  1F 73 03 E9 79 E6 93 F6  46 FE FF 75 07 F7 46 0A   .s..y... F..u..F.
12C30:  02 00 75 34 B4 3E CD 21  8A 46 0A 24 03 0A 46 FE   ..u4.>.! .F.$..F.
12C40:  1E C5 56 06 B4 3D CD 21  1F 72 D8 93 F6 46 FD 01   ..V..=.! .r...F..
12C50:  75 16 F7 46 0C 01 00 74  0F 80 C9 01 1E C5 56 06   u..F...t ......V.
12C60:  B8 01 43 CD 21 1F 72 BB  F6 46 FC 40 75 3F 1E C5   ..C.!.r. .F.@u?..
12C70:  56 06 B8 00 43 CD 21 1F  8B C1 32 C9 25 01 00 74   V...C.!. ..2.%..t
12C80:  02 B1 10 F7 46 0A 08 00  74 03 80 C9 20 3B 1E B7   ....F... t... ;..
12C90:  08 72 0A B4 3E CD 21 B8  00 18 E9 B9 FE 0A 4E FC   .r..>.!. ......N.
12CA0:  80 C9 01 88 8F B9 08 8B  C3 8B E5 5D CB 32 C9 EB   ........ ...].2..
12CB0:  DC A1 AC 08 F7 D0 23 C1  33 C9 A8 80 75 03 80 C9   ......#. 3...u...
12CC0:  01 C3 55 8B EC 83 EC 02  8B 5E 06 3B 1E B7 08 72   ..U..... .^.;...r
12CD0:  06 F9 B8 00 09 EB 73 33  C0 8B 4E 0C E3 6C F6 87   ......s3 ..N..l..
12CE0:  B9 08 02 75 65 81 3E 24  0D D6 D6 75 04 FF 16 26   ...ue.>$ ...u...&
12CF0:  0D 8B 4E 0C 1E C5 56 08  B4 3F CD 21 1F 73 04 B4   ..N...V. .?.!.s..
12D00:  09 EB 47 F6 87 B9 08 80  74 40 80 A7 B9 08 FB 56   ..G..... t@.....V
12D10:  57 1E 07 8E 5E 0A FC 8B  F2 8B FA 8B C8 E3 27 B4   W...^... ......'.
12D20:  0D 80 3C 0A 75 06 26 80  8F B9 08 04 AC 3A C4 74   ..<.u.&. .....:.t
12D30:  1C 3C 1A 75 08 26 80 8F  B9 08 02 EB 05 88 05 47   .<.u.&.. .......G
12D40:  E2 EA 8B C7 2B C2 06 1F  5F 5E E9 52 E5 83 F9 01   ....+... _^.R....
12D50:  74 07 80 3C 0A 74 E9 EB  E4 06 1F F6 87 B9 08 40   t..<.t.. .......@
12D60:  74 1C B8 00 44 CD 21 F7  C2 20 00 75 0D 1E 16 1F   t...D.!. . .u....
12D70:  8D 56 FF B4 3F CD 21 1F  72 CE B0 0A EB 30 1E 16   .V..?.!. r....0..
12D80:  1F C6 46 FF 00 8D 56 FF  B4 3F CD 21 1F 72 B9 0B   ..F...V. .?.!.r..
12D90:  C0 74 19 83 7E 0C 01 74  1F B9 FF FF 8B D1 B8 01   .t..~..t ........
12DA0:  42 CD 21 B9 01 00 80 7E  FF 0A 74 07 B0 0D C5 56   B.!....~ ..t....V
12DB0:  08 EB 8A C5 56 08 EB 88  80 7E FF 0A 75 DB EB BA   ....V... .~..u...
12DC0:  55 8B EC 83 EC 08 8B 5E  06 3B 1E B7 08 72 07 B8   U......^ .;...r..
12DD0:  00 09 F9 E9 C9 E4 81 3E  24 0D D6 D6 75 04 FF 16   .......> $...u...
12DE0:  26 0D F6 87 B9 08 20 74  0B B8 02 42 33 C9 8B D1   &..... t ...B3...
12DF0:  CD 21 72 DF F6 87 B9 08  80 74 7C 8C 5E FA 8E 46   .!r..... .t|.^..F
12E00:  0A C5 56 08 33 C0 89 46  FE 89 46 FC FC 57 56 8B   ..V.3..F ..F..WV.
12E10:  FA 8B F2 89 66 F8 8B 4E  0C E3 3F B0 0A F2 AE 75   ....f..N ..?....u
12E20:  51 1E 8E 5E FA 9A 7C 22  AB 10 3D A8 00 76 4A 1F   Q..^..|" ..=..vJ.
12E30:  83 EC 02 8B DC BA 00 02  3D 28 02 73 03 BA 80 00   ........ =(.s....
12E40:  2B E2 8B D4 8B FA 16 07  8B 4E 0C AC 3C 0A 74 0C   +....... .N..<.t.
12E50:  3B FB 74 19 AA E2 F4 E8  26 00 EB 79 B0 0D 3B FB   ;.t..... &..y..;.
12E60:  75 03 E8 1B 00 AA B0 0A  FF 46 FC EB E3 E8 10 00   u....... .F......
12E70:  EB E2 5E 5F 8E 5E FA EB  6D B8 FC FF 0E E8 EC E0   ..^_.^.. m.......
12E80:  50 53 51 1E 06 1F 8B CF  2B CA E3 12 51 8B 5E 06   PSQ..... +...Q.^.
12E90:  B4 40 CD 21 59 72 0E 01  46 FE 3B C8 77 07 1F 59   .@.!Yr.. F.;.w..Y
12EA0:  5B 58 8B FA C3 9F 1F 83  C4 08 83 7E FE 00 75 25   [X...... ...~..u%
12EB0:  9E 73 04 B4 09 EB 24 8E  5E FA F6 87 B9 08 40 74   .s....$. ^.....@t
12EC0:  0E 8E 5E 0A 8B 5E 08 80  3F 1A 75 03 F8 EB 0C F9   ..^..^.. ?.u.....
12ED0:  B8 00 1C EB 06 8B 46 FE  2B 46 FC 8B 66 F8 5E 5F   ......F. +F..f.^_
12EE0:  8E 5E FA E9 B9 E3 8B 4E  0C 0B C9 75 05 8B C1 E9   .^.....N ...u....
12EF0:  AD E3 1E C5 56 08 B4 40  CD 21 1E 07 1F 73 04 B4   ....V..@ .!...s..
12F00:  09 EB E0 0B C0 75 DC F6  87 B9 08 40 74 0B 8B DA   .....u.. ...@t...
12F10:  26 80 3F 1A 75 03 F8 EB  CA F9 B8 00 1C EB C4 00   &.?.u... ........
12F20:  59 5A A1 EC 08 3B C4 73  07 2B C4 F7 D8 52 51 CB   YZ...;.s .+...RQ.
12F30:  33 C0 EB F9 EA AF 22 AB  10 00 EA 9C 22 AB 10 00   3.....". ....."...
12F40:  55 8B EC 56 C4 76 06 8C  C1 E3 05 26 80 4C FE 01   U..V.v.. ...&.L..
12F50:  5E 5D CB 55 8B EC 56 57  8B 4E 06 83 F9 E8 77 69   ^].U..VW .N....wi
12F60:  1E A1 6A 0B 0B C0 74 48  BF 96 23 8B 36 72 0B C5   ..j...tH ..#.6r..
12F70:  1E 6C 0B 1E 56 57 FF D7  5F 5E 73 2B 8C DA C5 5F   .l..VW.. _^s+..._
```

```
12F80:  0C 3B D6 75 EF 58 1F 1E  C4 36 6C 0B 26 8B 74 12   .;.u.X.. .6l.&.t.
12F90:  C5 1E 68 0B 8C DA 3B D0  75 D9 1F 1E 81 FF 12 24   ..h...;. u......$
12FA0:  74 0E BF 12 24 EB C4 5E  81 FF 96 23 74 0F EB 0A   t...$..^ ...#t...
12FB0:  07 06 BF 68 0B E8 FE 01  72 0E E8 7D 00 1F 89 16   ...h.... r..}....
12FC0:  6E 0B 89 1E 6C 0B EB 04  1F 33 C0 99 5F 5E 5D CB   n...l... .3.._^].
12FD0:  06 57 8B F8 03 FB 89 7F  04 4F 4F 2D 16 00 8D 77   .W...... .OO-...w
12FE0:  14 C7 05 FE FF 89 7F 0A  48 89 04 8C 1F 8B C6 8C   ........ H.......
12FF0:  DA 8E C2 8D 7F 06 FC AB  AB 47 47 33 C0 AB AB AB   ........ .GG3....
13000:  AB 5F 07 C3 26 8B 45 02  0B C0 75 09 26 8C 5D 02   ._..&.E. ..u.&.].
13010:  26 89 1D EB 14 06 26 C4  75 08 26 8C 5C 0E 26 89   &.....&. u.&.\.&.
13020:  5C 0C 8C 47 12 89 77 10  07 26 8C 5D 0A 26 89 5D   \..G..w. .&.].&.]
13030:  08 26 8C 5D 06 26 89 5D  04 C3 41 80 E1 FE 53 FC   .&.].&.] ..A...S.
13040:  8B 77 08 8B 5F 0A 33 FF  EB 23 8B C3 5B A8 01 75   .w.._.3. .#..[..u
13050:  42 53 8B 77 06 8B 5F 08  3B DE 74 36 4B 33 FF EB   BS.w.._. ;.t6K3..
13060:  0C 90 8D 54 FE 3B D3 73  E1 03 F0 72 23 AD A8 01   ...T.;.s ...r#...
13070:  74 F0 8B FE 48 3B C1 73  23 03 F0 72 13 8B D0 AD   t...H;.s #..r....
13080:  A8 01 74 DE 03 C2 05 02  00 8B F7 89 44 FE EB E4   ..t..... ....D...
13090:  8B C0 5B 8B 47 06 89 47  08 F9 EB 19 5B 89 4C FE   ..[.G..G ....[.L.
130A0:  74 09 03 F9 2B C1 48 89  05 2B F9 03 F9 89 7F 08   t...+.H. .+......
130B0:  8B C6 8C DA F8 C3 51 57  F6 47 02 01 74 66 E8 D5   ......QW .G..tf..
130C0:  00 8B FE 8B 04 A8 01 74  03 2B C8 49 41 41 8B 77   .......t .+.IAA.w
130D0:  04 0B F6 74 4F 03 CE 73  09 33 C0 BA F0 FF E3 33   ...tO..s .3.....3
130E0:  EB 42 B8 1D 24 8E C0 26  A1 76 0B 3D 00 20 74 16   .B..$..& .v.=. t.
130F0:  BA 00 80 3B D0 72 06 D1  EA 75 F8 EB 22 83 FA 08   ...;.r.. .u.."...
13100:  72 1D D1 E2 8B C2 48 8B  D0 03 C1 73 02 33 C0 F7   r.....H. ...s.3..
13110:  D2 23 C2 52 E8 2E 00 5A  73 0D 83 FA F0 74 05 B8   .#.R...Z s....t..
13120:  10 00 EB E2 F9 EB 1B 8B  D0 2B 57 04 89 47 04 89   ........ .+W..G..
13130:  7F 08 8B 77 0A 4A 89 14  42 03 F2 C7 04 FE FF 89   ...w.J.. B.......
13140:  77 0A 5F 59 C3 8B D0 F6  47 02 04 74 0F 4A 8B 77   w._Y.... G..t.J.w
13150:  04 4E 3B D6 72 05 39 57  FE 73 36 42 53 51 8C DE   .N;.r.9W .s6BSQ..
13160:  8E C6 B1 04 D3 E8 75 03  B8 00 10 F6 47 02 04 74   ......u. ....G..t
13170:  0A 03 C6 8B 1E B0 08 2B  C3 8E C3 8B D8 B4 4A CD   .......+ ......J.
13180:  21 59 5B 72 10 8B C2 F6  47 02 04 74 04 4A 89 57   !Y[r.... G..t.J.W
13190:  FE F8 EB 01 F9 C3 57 8B  77 08 3B 77 0A 75 03 8B   ......W. w.;w.u..
131A0:  77 06 AD 3D FE FF 74 08  8B FE 24 FE 03 F0 EB F2   w..=..t. ..$.....
131B0:  4F 4F 8B F7 5F C3 8B D1  83 C2 27 80 E2 F0 8B DA   OO.._... ..'.....
131C0:  F7 DB F7 DB F5 D1 DB D1  EB D1 EB D1 EB B4 48 CD   ........ ......H.
131D0:  21 72 26 3B 06 8C 08 76  F4 3B 06 8A 08 76 03 A3   !r&;...v .;...v..
131E0:  8A 08 8E D8 33 DB 26 8B  45 0C 89 47 02 8B C2 E8   ....3.&. E..G....
131F0:  DE FD E8 0F FE F8 EB 01  F9 C3 55 8B EC 8B D7 8B   ........ ..U.....
13200:  DE 1E C4 7E 06 33 C0 B9  FF FF F2 AE 8D 75 FF C4   ...~.3.. .....u..
13210:  7E 0A B9 FF FF F2 AE F7  D1 2B F9 8C C0 8E D8 8E   ~....... .+......
13220:  46 08 87 FE 8B 46 06 F7  C6 01 00 74 02 A4 49 D1   F....F.. ...t..I.
13230:  E9 F3 A5 13 C9 F3 A4 8B  F3 8B FA 1F 8C C2 5D CB   ........ ......].
13240:  55 8B EC 8B D7 8B DE 1E  C5 76 0A 8B FE 8C D8 8E   U....... .v......
13250:  C0 33 C0 B9 FF FF F2 AE  F7 D1 C4 7E 06 8B C7 A8   .3...... ...~....
13260:  01 74 02 A4 49 D1 E9 F3  A5 13 C9 F3 A4 8B F3 8B   .t..I... ........
13270:  FA 1F 8C C2 5D CB 55 8B  EC 8B D7 8B DE 1E C5 76   ....].U. .......v
13280:  06 C4 7E 0A 33 C0 B9 FF  FF F2 AE F7 D1 2B F9 F3   ..~.3... .....+..
13290:  A6 74 05 1B C0 1D FF FF  1F 8B F3 8B FA 5D CB 00   .t...... .....]..
132A0:  55 8B EC 8B D7 C4 7E 06  33 C0 B9 FF FF F2 AE F7   U.....~. 3.......
132B0:  D1 49 91 8B FA 5D CB 00  55 8B EC 57 56 1E C4 7E   .I...].. U..WV..~
132C0:  06 C5 76 0A 8B DF 8B 4E  0E E3 0C AC 0A C0 74 03   ..v....N ......t.
132D0:  AA E2 F8 32 C0 F3 AA 8B  C3 8C C2 1F 5E 5F 8B E5   ...2.... ....^_..
```

```
132E0:  5D CB 55 8B EC 57 56 1E  8B 4E 0E E3 27 8B D9 C4   ].U..WV. .N..'...
132F0:  7E 06 8B F7 33 C0 F2 AE  F7 D9 03 CB 8B FE C5 76   ~...3... .......v
13300:  0A F3 A6 8A 44 FF 33 C9  26 3A 45 FF 77 04 74 04   ....D.3. &:E.w.t.
13310:  49 49 F7 D1 8B C1 1F 5E  5F 8B E5 5D CB 00 E9 01   II.....^ _..]....
13320:  00 00 55 8B EC 57 56 1E  C5 76 06 33 C0 99 33 DB   ..U..WV. .v.3..3.
13330:  AC 3C 20 74 FB 3C 09 74  F7 50 3C 2D 74 04 3C 2B   .< t.<.t .P<-t.<+
13340:  75 01 AC 3C 39 77 1F 2C  30 72 1B D1 E3 D1 D2 8B   u..<9w., 0r......
13350:  CB 8B FA D1 E3 D1 D2 D1  E3 D1 D2 03 D9 13 D7 03   ........ ........
13360:  D8 83 D2 00 EB DC 58 3C  2D 93 75 07 F7 D8 83 D2   ......X< -.u.....
13370:  00 F7 DA 1F 5E 5F 5D CB  55 8B EC 56 57 B3 01 8B   ....^_]. U..VW...
13380:  4E 0C 8B 46 06 33 D2 83  F9 0A 75 01 99 1E C5 7E   N..F.3.. ..u....~
13390:  08 E9 BD 07 55 8B EC 83  EC 04 56 A1 D3 08 8B 16   ....U... ..V.....
133A0:  D5 08 89 46 FC 89 56 FE  0B D0 74 6E 8B 46 08 0B   ...F..V. ..tn.F..
133B0:  46 06 74 66 FF 76 08 FF  76 06 9A FC 25 AB 10 83   F.tf.v.. v...%...
133C0:  C4 04 8B F0 C4 5E FC 26  8B 47 02 26 0B 07 74 4A   .....^.& .G.&..tJ
133D0:  26 FF 77 02 26 FF 37 9A  FC 25 AB 10 83 C4 04 3B   &.w.&.7. .%.....;
133E0:  C6 7E 31 C4 5E FC 26 C4  1F 26 80 38 3D 75 25 56   .~1.^.&. .&.8=u%V
133F0:  FF 76 08 FF 76 06 06 53  9A 3E 26 AB 10 83 C4 0A   .v..v..S .>&.....
13400:  0B C0 75 10 C4 5E FC 26  8B 07 26 8B 57 02 03 C6   ..u..^.& ..&.W...
13410:  40 EB 0A 90 83 46 FC 04  EB AA 2B C0 99 5E 8B E5   @....F.. ..+..^..
13420:  5D CB 55 8B EC 56 57 8B  56 0A 0B D2 7E 56 4A 8B   ].U..VW. V...~VJ.
13430:  5E 0C C4 7E 06 0B D2 74  55 8B 4F 04 E3 1F 3B CA   ^..~...t U.O...;.
13440:  76 02 8B CA 1E C5 37 B4  0A 51 AC AA 3A C4 E0 FA   v.....7. .Q..:...
13450:  58 1F 89 37 74 33 29 47  04 2B D0 EB D8 06 53 52   X..7t3)G .+....SR
13460:  1E 53 0E E8 02 E3 83 C4  04 5A 5B 07 3D FF FF 74   .S...... .Z[.=..t
13470:  08 AA 3C 0A 74 18 4A EB  BC 3B 7E 06 74 06 F6 47   ..<.t.J. .;~.t..G
13480:  0A 20 74 0A 33 C0 99 EB  0E 2B C1 29 47 04 33 C0   . t.3... .+.)G.3.
13490:  AA 8B 46 06 8B 56 08 5F  5E 5D CB 00 55 8B EC 83   ..F..V._ ^]..U...
134A0:  EC 02 57 56 FF 76 08 FF  76 06 9A FC 25 AB 10 83   ..WV.v.. v...%...
134B0:  C4 04 8B F8 FF 76 0C FF  76 0A E8 AF E5 83 C4 04   .....v.. v.......
134C0:  8B F0 FF 76 0C FF 76 0A  57 B8 01 00 50 FF 76 08   ...v..v. W...P.v.
134D0:  FF 76 06 9A C4 08 AB 10  83 C4 0C 89 46 FE FF 76   .v...... ....F..v
134E0:  0C FF 76 0A 56 E8 05 E6  83 C4 06 39 7E FE 75 04   ..v.V... ...9~.u.
134F0:  2B C0 EB 03 B8 FF FF 5E  5F 8B E5 5D CB 90 55 8B   +......^ _..]..U.
13500:  EC 83 EC 04 57 56 C6 06  EE 4E 42 8B 46 06 8B 56   ....WV.. .NB.F..V
13510:  08 A3 EA 4E 89 16 EC 4E  BE E4 4E 89 04 89 54 02   ...N...N ..N...T.
13520:  C7 06 E8 4E FF 7F 8D 46  0E 16 50 FF 76 0C FF 76   ...N...F ..P.v..v
13530:  0A 8B C6 1E 50 9A BA 17  AB 10 83 C4 0C 8B F8 FF   ....P... ........
13540:  0E E8 4E 78 0F C4 1E E4  4E FF 06 E4 4E 26 C6 07   ..Nx.... N...N&..
13550:  00 EB 0E 90 1E 56 2B C0  50 9A 60 0B AB 10 83 C4   .....V+. P.`.....
13560:  06 8B C7 5E 5F 8B E5 5D  CB 90 55 8B EC 83 EC 04   ...^_..] ..U.....
13570:  56 C6 06 FA 4E 49 8B 46  06 8B 56 08 A3 F6 4E 89   V...NI.F ..V...N.
13580:  16 F8 4E BE F0 4E 89 04  89 54 02 52 50 9A FC 25   ..N..N.. .T.RP..%
13590:  AB 10 83 C4 04 A3 F4 4E  8D 46 0E 16 50 FF 76 0C   .......N .F..P.v.
135A0:  FF 76 0A B8 F0 4E 1E 50  9A 66 0F AB 10 83 C4 0C   .v...N.P .f......
135B0:  5E 8B E5 5D CB 90 55 8B  EC 83 EC 02 57 56 8B 76   ^..]..U. ....WV.v
135C0:  06 1E 56 E8 A6 E4 83 C4  04 8B F8 FF 76 10 FF 76   ..V..... ....v..v
135D0:  0E FF 76 0C FF 76 0A 1E  56 9A BA 17 AB 10 83 C4   ..v..v.. V.......
135E0:  0C 89 46 FE 1E 56 57 E8  03 E5 83 C4 06 8B 46 FE   ..F..VW. ......F.
135F0:  5E 5F 8B E5 5D CB 55 8B  EC 8E 46 08 B4 49 CD 21   ^_..].U. ..F..I.!
13600:  5D CB 55 8B EC 56 57 8B  5E 0A 8B 46 06 F7 E3 8B   ].U..VW. ^..F....
13610:  C8 8B FA 8B 46 08 F7 E3  03 C7 8B D0 0B C1 74 1E   ....F... ......t.
13620:  33 F6 8D 47 FF 83 FA 0F  77 14 72 05 83 F9 F0 77   3..G.... w.r....w
13630:  0D 83 FA 02 77 04 72 08  E3 06 23 C3 74 18 EB 6D   ....w.r. ..#.t..m
```

```
13640:  83 FA 01 72 11 23 C3 74  0D 33 C0 F7 F3 8B F2 03   ...r.#.t .3......
13650:  CA 72 5A BA 01 00 8B D9  83 C3 0F 83 D2 00 B9 04   .rZ..... ........
13660:  00 D1 EA D1 DB E2 FA B4  48 CD 21 72 40 3B 06 8C   ........ H.!r@;..
13670:  08 76 F4 8B D0 03 D3 4A  3B 16 8A 08 76 04 89 16   .v.....J ;...v...
13680:  8A 08 8E C0 8B D0 FC B9  00 10 3B D9 73 02 8B CB   ........ ..;.s...
13690:  D1 E1 D1 E1 D1 E1 33 FF  33 C0 F3 AB 96 B9 00 10   ......3. 3.......
136A0:  2B D9 76 0C 96 8C C0 03  C1 8E C0 EB DD 33 C0 99   +.v..... .....3..
136B0:  5F 5E 5D CB 55 8B EC 8B  56 06 EC 32 E4 8B E5 5D   _^].U... V..2...]
136C0:  CB 00 55 8B EC 8B 56 06  8A 46 08 EE B4 00 5D CB   ..U...V. .F....].
136D0:  55 8B EC 83 EC 22 9A 3A  2B AB 10 B8 3C 00 99 52   U....".: +...<..R
136E0:  50 FF 36 DA 0C FF 36 D8  0C 9A DA 2F AB 10 C4 5E   P.6...6. .../...^
136F0:  06 26 89 47 06 8D 46 FA  16 50 9A 60 2F AB 10 83   .&.G..F. .P.`/...
13700:  C4 04 8D 46 F6 16 50 9A  7C 2F AB 10 83 C4 04 80   ...F..P. |/......
13710:  7E F6 00 75 13 80 7E F7  00 75 0D 8D 46 FA 16 50   ~..u..~. .u..F..P
13720:  9A 60 2F AB 10 83 C4 04  8B 46 FC 2D BC 07 89 46   .`/..... .F.-...F
13730:  E0 05 50 00 89 46 EE 8A  46 FA 2A E4 89 46 DE 89   ..P..F.. F.*..F..
13740:  46 EA 8A 5E FB 2A FF 89  5E E2 4B 89 5E EC D1 E3   F..^.*.. ^.K.^...
13750:  03 87 B2 0C 89 46 F2 F6  46 E0 03 75 0A 83 7E E2   .....F.. F..u..~.
13760:  02 7E 04 40 89 46 F2 8A  46 F6 2A E4 89 46 E8 8A   .~.@.F.. F.*..F..
13770:  46 F9 8B C8 D1 E0 D1 E0  03 C1 D1 E0 C4 5E 06 26   F....... .....^.&
13780:  89 47 04 8A 46 F8 2A E4  50 8A 46 F7 50 8A 46 F6   .G..F.*. P.F.P.F.
13790:  50 FF 76 DE FF 76 E2 FF  76 E0 9A F6 2C AB 10 83   P.v..v.. v...,...
137A0:  C4 0C C4 5E 06 26 89 07  26 89 57 02 83 3E DC 0C   ...^.&.. &.W..>..
137B0:  00 74 1D 8D 46 E4 16 50  9A 1C 2C AB 10 83 C4 04   .t..F..P ..,.....
137C0:  0B C0 74 0C C4 5E 06 26  C7 47 08 01 00 EB 0A 90   ..t..^.& .G......
137D0:  C4 5E 06 26 C7 47 08 00  00 8B E5 5D CB 90 83 3E   .^.&.G.. ...]...>
137E0:  FC 4E 00 75 09 9A 4C 2B  AB 10 FF 06 FC 4E CB 90   .N.u..L+ .....N..
137F0:  55 8B EC 83 EC 04 56 B8  CC 0C 1E 50 9A F0 26 AB   U.....V. ...P..&.
13800:  10 83 C4 04 89 46 FC 89  56 FE 0B D0 75 03 E9 A9   .....F.. V...u...
13810:  00 C4 5E FC 26 80 3F 00  75 03 E9 9D 00 B8 03 00   ..^.&.?. u.......
13820:  50 06 53 FF 36 E0 0C FF  36 DE 0C 9A 14 26 AB 10   P.S.6... 6....&..
13830:  83 C4 0A B8 10 0E 99 52  50 83 46 FC 03 FF 76 FE   .......R P.F...v.
13840:  FF 76 FC 9A 7A 26 AB 10  83 C4 04 52 50 9A 74 30   .v..z&.. ...RP.t0
13850:  AB 10 A3 D8 0C 89 16 DA  0C 2B F6 8E 46 FE 8B 5E   ........ .+..F..^
13860:  FC 26 80 38 00 74 1A 26  8A 00 8B C8 98 8B D8 F6   .&.8.t.& ........
13870:  87 97 0B 04 75 05 80 F9  2D 75 06 46 83 FE 03 7C   ....u... -u.F...|
13880:  DD 8B 5E FC 26 80 38 00  74 1A B8 03 00 50 03 DE   ..^.&.8. t....P..
13890:  06 53 FF 36 E4 0C FF 36  E2 0C 9A 14 26 AB 10 83   .S.6...6 ....&...
138A0:  C4 0A EB 08 C4 1E E2 0C  26 C6 07 00 C4 1E E2 0C   ........ &.......
138B0:  26 80 3F 01 1B C0 40 A3  DC 0C 5E 8B E5 5D CB 90   &.?...@. ..^..]..
138C0:  55 8B EC 83 EC 04 57 56  C4 5E 06 26 83 7F 08 03   U.....WV .^.&....
138D0:  7D 03 E9 BD 00 26 83 7F  08 09 7E 03 E9 B3 00 26   }....&.. ..~....&
138E0:  83 7F 08 03 7E 0A 26 83  7F 08 09 7D 03 E9 89 00   ....~.&. ...}....
138F0:  26 8B 77 0A 81 C6 6C 07  81 FE C2 07 7E 16 26 83   &.w...l. ....~.&.
13900:  7F 08 03 75 0F 26 8B 5F  08 D1 E3 8B 87 B2 0C 05   ...u.&._ ........
13910:  07 00 EB 0A 26 8B 5F 08  D1 E3 8B 87 B4 0C 89 46   ....&._. .......F
13920:  FC F7 C6 03 00 75 03 FF  46 FC 8B 5E 06 26 8B 77   .....u.. F..^.&.w
13930:  0A 83 EE 46 8B C6 B9 6D  01 F7 E9 8B C8 8D 44 01   ...F...m ......D.
13940:  8B F9 99 33 C2 2B C2 B9  02 00 D3 F8 33 C2 2B C2   ...3.+.. ....3.+.
13950:  03 C7 03 46 FC 05 04 00  B9 07 00 99 F7 F9 2B 56   ...F.... ......+V
13960:  FC F7 DA 26 83 7F 08 03  75 14 26 3B 57 0E 7C 09   ...&.... u.&;W.|.
13970:  75 20 26 83 7F 04 02 7C  19 B8 01 00 EB 16 C4 5E   u &....| .......^
13980:  06 8B C2 26 39 47 0E 7C  F0 75 07 26 83 7F 04 01   ...&9G.| .u.&....
13990:  7C E7 2B C0 5E 5F 8B E5  5D CB 55 8B EC 83 EC 16   |.+.^_.. ].U.....
```

```
139A0:  57 56 8B 76 06 B8 80 51  BA 01 00 52 50 8D 44 03   WV.v...Q ...RP.D.
139B0:  99 33 C2 2B C2 B9 02 00  D3 F8 33 C2 2B C2 99 52   .3.+.... ..3.+..R
139C0:  50 9A 74 30 AB 10 89 46  EA 89 56 EC 8B 5E 08 D1   P.t0...F ..V..^..
139D0:  E3 8B BF B0 0C 8B C6 B9  04 00 99 F7 F9 0B D2 75   ........ .......u
139E0:  07 83 7E 08 02 7E 01 47  8B 46 0A 03 C7 89 46 FC   ..~..~.G .F....F.
139F0:  9A 3A 2B AB 10 B8 3C 00  99 52 50 52 50 B8 18 00   .:+...<. .RPRP...
13A00:  99 52 50 B9 6D 01 8B C6  F7 E9 03 46 0A 03 C7 99   .RP.m... ...F....
13A10:  05 44 0E 83 D2 00 52 50  9A 74 30 AB 10 8B C8 8B   .D....RP .t0.....
13A20:  46 0C 8B DA 99 03 C1 13  D3 52 50 9A 74 30 AB 10   F....... .RP.t0..
13A30:  8B C8 8B 46 0E 8B DA 99  03 C1 13 D3 52 50 9A 74   ...F.... ....RP.t
13A40:  30 AB 10 8B C8 8B 46 10  8B DA 99 03 C1 13 D3 03   0.....F. ........
13A50:  06 D8 0C 13 16 DA 0C 01  46 EA 11 56 EC 8D 44 50   ........ F..V..DP
13A60:  89 46 F8 8B 46 08 48 89  46 F6 8B 46 0C 89 46 F2   .F..F.H. F..F..F.
13A70:  83 3E DC 0C 00 74 1A 8D  46 EE 16 50 9A 1C 2C AB   .>...t.. F..P..,.
13A80:  10 83 C4 04 0B C0 74 09  81 6E EA 10 0E 83 5E EC   ......t. .n....^.
13A90:  00 8B 46 EA 8B 56 EC 5E  5F 8B E5 5D CB 90 55 8B   ..F..V.^ _..]..U.
13AA0:  EC 8B 4E 0E 1E 57 56 E3  48 C5 76 0A C4 7E 06 8B   ..N..WV. H.v..~..
13AB0:  C1 48 8B D7 F7 D2 2B C2  1B DB 23 C3 03 C2 8B D6   .H....+. ..#.....
13AC0:  F7 D2 2B C2 1B DB 23 C3  03 C2 40 91 2B C1 D1 E9   ..+...#. ..@.+...
13AD0:  F3 A5 13 C9 F3 A4 91 E3  18 0B F6 75 07 8C D8 05   ........ ...u....
13AE0:  00 10 8E D8 0B FF 75 C7  8C C0 05 00 10 8E C0 EB   ......u. ........
13AF0:  BE 8B 46 06 8B 56 08 5E  5F 1F 5D CB 55 8B EC 8B   ..F..V.^ _.].U...
13B00:  4E 0C E3 38 57 C4 7E 06  8B D7 F7 DA 74 0C 2B D1   N..8W.~. ....t.+.
13B10:  1B DB 23 D3 03 D1 87 D1  2B D1 8B 46 0A 8A E0 D1   ..#..... +..F....
13B20:  E9 F3 AB 13 C9 F3 AA 87  D1 E3 10 8C C3 81 C3 00   ........ ........
13B30:  10 8E C3 D1 E9 F3 AB 13  C9 F3 AA 5F 8B 46 06 8B   ........ ..._.F..
13B40:  56 08 5D CB 8B 4E 0E 8B  46 06 8B 56 08 1E C5 7E   V.]..N.. F..V...~
13B50:  0A 57 1E 07 FC 93 0A C0  74 13 83 F9 0A 75 0E 0B   .W...... t....u..
13B60:  D2 79 0A B0 2D AA F7 DB  83 D2 00 F7 DA 8B F7 92   .y..-... ........
13B70:  33 D2 0B C0 74 02 F7 F1  93 F7 F1 92 87 D3 04 30   3...t... .......0
13B80:  3C 39 76 02 04 27 AA 8B  C2 0B C3 75 E2 88 05 4F   <9v..'.. ...u...O
13B90:  AC 86 05 88 44 FF 8D 44  01 3B C7 72 F2 8C DA 58   ....D..D .;.r...X
13BA0:  1F 5F 5E 8B E5 5D CB 00  55 8B EC 8B 46 06 99 33   ._^..].. U...F..3
13BB0:  C2 2B C2 5D CB 90 55 8B  EC 1E C5 56 06 B4 41 CD   .+.]..U. ...V..A.
13BC0:  21 1F E9 C5 D6 00 55 8B  EC 1E B0 4F C5 56 06 EB   !.....U. ...O.V..
13BD0:  09 55 8B EC 1E B0 4E C5  56 0C B4 2F CD 21 B4 1A   .U....N. V../.!..
13BE0:  CD 21 3C 4E 75 06 C5 56  06 8B 4E 0A 8A E0 CD 21   .!<Nu..V ..N....!
13BF0:  50 9F 50 8C C2 8E DA 8B  D3 B4 1A CD 21 58 9E 58   P.P..... ....!X.X
13C00:  1F E9 8E D6 55 8B EC B4  2A CD 21 1E C5 5E 06 89   ....U... *.!..^..
13C10:  4F 02 88 77 01 88 17 88  47 04 1F 33 C0 5D CB 00   O..w.... G..3.]..
13C20:  55 8B EC B4 2C CD 21 1E  C5 5E 06 88 2F 88 4F 01   U...,.!. .^../.O.
13C30:  88 77 02 88 57 03 1F 33  C0 5D CB 00 55 8B EC 1E   .w..W..3 .]..U...
13C40:  53 C5 5E 06 FF 76 0C FF  76 0A FF 77 02 FF 37 0E   S.^..v.. v..w..7.
13C50:  E8 C5 00 89 07 89 57 02  5B 1F 5D CA 08 00 55 8B   ......W. [.]...U.
13C60:  EC 1E 53 C5 5E 06 8B 07  8B 57 02 8B 4E 0A 0E E8   ..S.^... .W..N...
13C70:  78 01 89 07 89 57 02 5B  1F 5D CA 06 00 00 55 8B   x....W.[ .]....U.
13C80:  EC 57 56 53 33 FF 8B 46  08 0B C0 7D 11 47 8B 56   .WVS3..F ...}.G.V
13C90:  06 F7 D8 F7 DA 1D 00 00  89 46 08 89 56 06 8B 46   ........ .F..V..F
13CA0:  0C 0B C0 7D 11 47 8B 56  0A F7 D8 F7 DA 1D 00 00   ...}.G.V ........
13CB0:  89 46 0C 89 56 0A 0B C0  75 15 8B 4E 0A 8B 46 08   .F..V... u..N..F.
13CC0:  33 D2 F7 F1 8B D8 8B 46  06 F7 F1 8B D3 EB 38 8B   3......F ......8.
13CD0:  D8 8B 4E 0A 8B 56 08 8B  46 06 D1 EB D1 D9 D1 EA   ..N..V.. F.......
13CE0:  D1 D8 0B DB 75 F4 F7 F1  8B F0 F7 66 0C 91 8B 46   ....u... ...f...F
13CF0:  0A F7 E6 03 D1 72 0C 3B  56 08 77 07 72 06 3B 46   .....r.; V.w.r.;F
```

```
13D00:  06 76 01 4E 33 D2 96 4F  75 07 F7 DA F7 D8 83 DA   .v.N3..O u.......
13D10:  00 5B 5E 5F 5D CA 08 00  55 8B EC 8B 46 08 8B 4E   .[^_]... U...F..N
13D20:  0C 0B C8 8B 4E 0A 75 09  8B 46 06 F7 E1 5D CA 08   ....N.u. .F...]..
13D30:  00 53 F7 E1 8B D8 8B 46  06 F7 66 0C 03 D8 8B 46   .S.....F ..f....F
13D40:  06 F7 E1 03 D3 5B 5D CA  08 00 55 8B EC 53 57 33   .....[]. ..U..SW3
13D50:  FF 8B 46 08 0B C0 7D 11  47 8B 56 06 F7 D8 F7 DA   ..F...}. G.V.....
13D60:  1D 00 00 89 46 08 89 56  06 8B 46 0C 0B C0 7D 10   ....F..V ..F...}.
13D70:  8B 56 0A F7 D8 F7 DA 1D  00 00 89 46 0C 89 56 0A   .V...... ...F..V.
13D80:  0B C0 75 18 8B 4E 0A 8B  46 08 33 D2 F7 F1 8B 46   ..u..N.. F.3....F
13D90:  06 F7 F1 8B C2 33 D2 4F  79 43 EB 48 8B D8 8B 4E   .....3.O yC.H...N
13DA0:  0A 8B 56 08 8B 46 06 D1  EB D1 D9 D1 EA D1 D8 0B   ..V..F.. ........
13DB0:  DB 75 F4 F7 F1 8B C8 F7  66 0C 91 F7 66 0A 03 D1   .u...... f...f...
13DC0:  72 0C 3B 56 08 77 07 72  0B 3B 46 06 76 06 2B 46   r.;V.w.r .;F.v.+F
13DD0:  0A 1B 56 0C 2B 46 06 1B  56 08 4F 79 07 F7 DA F7   ..V.+F.. V.Oy....
13DE0:  D8 83 DA 00 5F 5B 5D CA  08 00 32 ED E3 06 D1 E0   ...._[]. ..2.....
13DF0:  D1 D2 E2 FA CB 39 31 B2  00 0F 00 B0 C2 13 02 00   .....91. ........
13E00:  B2 00 F0 FF B0 00 D6 05  B0 4D 53 20 52 75 6E 2D   ........ .MS Run-
13E10:  54 69 6D 65 20 4C 69 62  72 61 72 79 20 2D 20 43   Time Lib rary - C
13E20:  6F 70 79 72 69 67 68 74  20 28 63 29 20 31 39 39   opyright  (c) 199
13E30:  30 2C 20 4D 69 63 72 6F  73 6F 66 74 20 43 6F 72   0, Micro soft Cor
13E40:  70 18 00 2A 2E 49 4D 47  00 4E 6F 20 69 6D 61 67   p..*.IMG .No imag
13E50:  65 73 20 66 6F 75 6E 64  0A 00 0A 66 69 6E 67 65   es found ...finge
13E60:  72 20 6E 61 6D 65 20 28  6F 72 20 27 65 78 69 74   r name ( or 'exit
13E70:  27 29 20 3E 20 00 25 73  00 65 78 69 74 00 25 73   ') > .%s .exit.%s
13E80:  25 31 64 00 25 73 25 73  2E 69 6D 67 00 0A 66 69   %1d.%s%s .img..fi
13E90:  6C 65 20 25 73 20 6E 6F  74 20 66 6F 75 6E 64 00   le %s no t found.
13EA0:  0A 70 72 6F 63 65 73 73  20 66 69 6E 67 65 72 20   .process  finger
13EB0:  25 73 00 20 2D 2D 20 66  69 6E 67 65 72 20 61 62   %s. -- f inger ab
13EC0:  6F 72 74 2C 20 63 6F 64  65 20 25 68 64 20 0A 00   ort, cod e %hd ..
13ED0:  20 64 6F 6E 65 CC 00 B2  00 12 00 B0 60 01 80 01    done... ....`...
13EE0:  00 00 00 00 11 00 22 00  34 00 45 00 57 00 69 00   ......". 4.E.W.i.
13EF0:  7A 00 8C 00 9E 00 B0 00  C2 00 D4 00 E6 00 F9 00   z....... ........
13F00:  0B 01 1E 01 31 01 44 01  58 01 6B 01 7F 01 94 01   ....1.D. X.k.....
13F10:  A8 01 BD 01 D2 01 E7 01  FD 01 13 02 2A 02 41 02   ........ ....*.A.
13F20:  58 02 70 02 89 02 A2 02  BC 02 D6 02 F1 02 0D 03   X.p..... ........
13F30:  29 03 47 03 65 03 84 03  A4 03 C5 03 E8 03 0B 04   ).G.e... ........
13F40:  30 04 56 04 7E 04 A7 04  D2 04 FF 04 2F 05 60 05   0.V.~... ..../.`.
13F50:  94 05 CA 05 03 06 40 06  80 06 C4 06 0C 07 58 07   ......@. ......X.
13F60:  AA 07 02 08 60 08 C6 08  33 09 AB 09 2D 0A BB 0A   ....`... 3...-...
13F70:  58 0B 05 0C C6 0C 9F 0D  94 0E AA 0F EB 10 60 12   X....... ......`.
13F80:  18 14 27 16 A9 18 CB 1B  D0 1F 2A 25 A6 2C DC 37   ..'..... ..*%.,.7
13F90:  89 4A DC 6F C9 DF 00 00  01 00 01 00 02 00 02 00   .J.o.... ........
13FA0:  03 00 03 00 04 00 04 00  05 00 06 00 06 00 07 00   ........ ........
13FB0:  07 00 08 00 08 00 09 00  09 00 0A 00 0B 00 0B 00   ........ ........
13FC0:  0C 00 0C 00 0D 00 0D 00  0E 00 0E 00 0F 00 0F 00   ........ ........
13FD0:  10 00 11 00 11 00 12 00  12 00 13 00 13 00 14 00   ........ ........
13FE0:  14 00 15 00 15 00 16 00  16 00 17 00 17 00 18 00   ........ ........
13FF0:  18 00 18 00 19 00 19 00  1A 00 1A 00 1A 00 1B 00   ........ ........
14000:  1C 00 1C 00 1D 00 1D 00  1D 00 1E 00 1E 00 1F 00   ........ ........
14010:  1F 00 20 00 20 00 20 00  21 00 21 00 22 00 22 00   .. . . . !.!.".".
14020:  22 00 23 00 23 00 23 00  24 00 24 00 25 00 25 00   ".#.#.#. $.$.%.%.
14030:  25 00 26 00 26 00 26 00  27 00 27 00 27 00 28 00   %.&.&.&. '.'.'.(.
14040:  28 00 28 00 29 00 29 00  29 00 2A 00 2A 00 2A 00   (.(.).). ).*.*.*.
14050:  2B 00 2B 00 2B 00 2C 00  2C 00 2C 00 2C 00 2D 00   +.+.+.,. ,.,.,.-.
```

```
14060:  10 27 0E 27 09 27 02 27  F7 26 E9 26 D9 26 C5 26   .'.'.'.' .&.&.&.&
14070:  AE 26 94 26 78 26 58 26  35 26 0F 26 E6 25 BB 25   .&.&x&X& 5&.&.%.%
14080:  8C 25 5B 25 26 25 EF 24  B4 24 77 24 37 24 F5 23   .%[%&%.$ .$w$7$.#
14090:  AF 23 67 23 1B 23 CE 22  7D 22 2A 22 D4 21 7B 21   .#g#.#." }"*".!{!
140A0:  20 21 C2 20 62 20 FF 1F  9A 1F 32 1F C8 1E 5B 1E    !. b .. ..2...[.
140B0:  EC 1D 7B 1D 07 1D 91 1C  19 1C 9F 1B 22 1B A3 1A   ..{..... ...."...
140C0:  23 1A A0 19 1B 19 95 18  0C 18 82 17 F5 16 67 16   #....... ......g.
140D0:  D7 15 46 15 B3 14 1E 14  88 13 F0 12 56 12 BB 11   ..F..... ....V...
140E0:  1F 11 82 10 E3 0F 43 0F  A2 0E FF 0D 5C 0D B7 0C   ......C. ....\...
140F0:  12 0C 6B 0B C4 0A 1C 0A  73 09 C9 08 1F 08 74 07   ..k..... s.....t.
14100:  C8 06 1C 06 6F 05 C2 04  15 04 67 03 B9 02 0B 02   ....o... ..g.....
14110:  5C 01 AE 00 00 00 00 00  AE 00 5C 01 0B 02 B9 02   \....... ..\.....
14120:  67 03 15 04 C2 04 6F 05  1C 06 C8 06 74 07 1F 08   g.....o. ....t...
14130:  C9 08 73 09 1C 0A C4 0A  6B 0B 12 0C B7 0C 5C 0D   ..s..... k.....\.
14140:  FF 0D A2 0E 43 0F E3 0F  82 10 1F 11 BB 11 56 12   ....C... ......V.
14150:  F0 12 88 13 1E 14 B3 14  46 15 D7 15 67 16 F5 16   ........ F...g...
14160:  82 17 0C 18 95 18 1B 19  A0 19 23 1A A3 1A 22 1B   ........ ..#...".
14170:  9F 1B 19 1C 91 1C 07 1D  7B 1D EC 1D 5B 1E C8 1E   ........ {...[...
14180:  32 1F 9A 1F FF 1F 62 20  C2 20 20 21 7B 21 D4 21   2.....b  .  !{!.!
14190:  2A 22 7D 22 CE 22 1B 23  67 23 AF 23 F5 23 37 24   *"}".".# g#.#.#7$
141A0:  77 24 B4 24 EF 24 26 25  5B 25 8C 25 BB 25 E6 25   w$.$.$&% [%.%.%.%
141B0:  0F 26 35 26 58 26 78 26  94 26 AE 26 C5 26 D9 26   .&5&X&x& .&.&.&.&
141C0:  E9 26 F7 26 02 27 09 27  0E 27 10 27 01 00 49 6E   .&.&.'.' .'.'..In
141D0:  73 75 66 66 69 63 69 65  6E 74 20 6D 65 6D 6F 72   sufficie nt memor
141E0:  79 0A 00 20 67 65 74 5F  69 6D 61 67 65 20 65 72   y.. get_ image er
141F0:  72 6F 72 3A 20 66 69 6C  65 20 6E 6F 74 20 63 6F   ror: fil e not co
14200:  6D 70 6C 65 74 65 0A 00  A0 01 40 00 80 01 00 00   mplete.. ..@.....
14210:  47 3A 5C 46 49 4E 47 45  52 5C 49 4D 47 44 31 31   G:\FINGE R\IMGD11
14220:  5C 45 03 B2 00 0D 00 B0  E8 03 E8 03 46 50 32 30   \E...... ....FP20
14230:  30 30 2E 43 46 47 00 70  6F 73 69 74 69 6F 6E 20   00.CFG.p osition
14240:  58 20 6F 75 74 20 6F 66  20 72 61 6E 67 65 20 25   X out of  range %
14250:  68 64 0A 00 70 6F 73 69  74 69 6F 6E 20 59 20 6F   hd..posi tion Y o
14260:  75 74 20 6F 66 20 72 61  6E 67 65 20 25 68 64 0A   ut of ra nge %hd.
14270:  00 72 62 00 66 69 6C 65  20 25 73 20 6E 6F 74 20   .rb.file  %s not
14280:  66 6F 75 6E 64 0A 00 20  2D 2D 20 69 6E 76 61 6C   found..  -- inval
14290:  69 64 20 6E 75 6D 62 65  72 20 6F 66 20 63 6F 6C   id numbe r of col
142A0:  6F 6D 6E 73 3A 20 25 68  64 20 69 6E 73 74 65 61   omns: %h d instea
142B0:  64 20 6F 66 20 25 68 64  0A 00 20 2D 2D 20 69 6E   d of %hd .. -- in
142C0:  76 61 6C 69 64 20 6E 75  6D 62 65 72 20 6F 66 20   valid nu mber of
142D0:  72 6F 77 73 3A 20 25 68  64 20 69 6E 73 74 65 61   rows: %h d instea
142E0:  64 20 6F 66 20 25 68 64  0A 00 77 62 00 4B 4F 00   d of %hd ..wb.KO.
142F0:  6C 73 65 6E 73 6F 72 2E  63 66 67 00 72 74 00 25   lsensor. cfg.rt.%
14300:  68 64 00 20 53 65 6E 73  6F 72 20 23 20 25 68 64   hd. Sens or # %hd
14310:  20 6E 6F 74 20 66 6F 75  6E 64 20 69 6E 20 25 73    not fou nd in %s
14320:  0A 00 25 68 64 00 25 68  64 20 25 68 64 20 25 68   ..%hd.%h d %hd %h
14330:  64 20 25 68 64 20 25 68  64 20 25 68 64 20 25 68   d %hd %h d %hd %h
14340:  64 00 20 25 73 20 6E 6F  74 20 66 6F 75 6E 64 0A   d. %s no t found.
14350:  00 47 3A 5C 46 49 4E 47  45 52 5C 49 4D 47 49 5C   .G:\FING ER\IMGI\
14360:  00 47 3A 5C 46 49 4E 47  45 52 5C 49 4D 47 44 5C   .G:\FING ER\IMGD\
14370:  00 47 3A 5C 46 49 4E 47  45 52 5C 49 4D 47 44 31   .G:\FING ER\IMGD1
14380:  31 5C 00 49 4D 47 44 5C  00 00 01 00 01 00 0A 00   1\.IMGD\ ........
14390:  0B 00 0E 00 0B 00 0A 00  0B 00 0E 00 0B 00 00 00   ........ ........
143A0:  02 00 01 00 0A 00 01 00  18 00 05 00 01 00 08 00   ........ ........
143B0:  0B 00 09 00 10 00 09 00  17 00 0B 00 03 00 0C 00   ........ ........
```

```
143C0:  05 00 0D 00 0C 00 10 00  01 00 12 00 08 00 12 00   ........ ........
143D0:  0F 00 13 00 16 00 16 00  13 00 18 00 00 00 18 00   ........ ........
143E0:  09 00 00 00 09 00 02 00  12 00 06 00 08 00 0A 00   ........ ........
143F0:  0F 00 0D 00 18 00 11 00  0B 00 14 00 0D 00 16 00   ........ ........
14400:  16 00 03 00 06 00 05 00  15 00 10 00 06 00 10 00   ........ ........
14410:  14 00 16 00 06 00 02 00  01 00 02 00 0D 00 06 00   ........ ........
14420:  0F 00 07 00 04 00 0B 00  0B 00 0C 00 13 00 0D 00   ........ ........
14430:  00 00 10 00 0F 00 15 00  02 00 18 00 0F 00 FF FF   ........ ........
14440:  FF FF 02 00 02 00 03 00  03 00 03 00 03 00 03 00   ........ ........
14450:  02 00 02 00 01 00 01 00  0F 00 0A 02 01 00 FE FF   ........ ........
14460:  00 00 00 00 05 00 01 00  00 00 83 00 64 00 47 00   ........ ....d.G.
14470:  00 00 B9 FF 9C FF B9 FF  00 00 47 00 00 00 47 00   ........ ..G...G.
14480:  64 00 47 00 00 00 B9 FF  9C FF B9 FF 00 00 00 00   d.G..... ........
14490:  01 00 32 6B 02 B2 00 11  00 B0 20 4C 46 44 46 3A   ..2k.... .. LFDF:
144A0:  20 65 6E 64 73 32 66 6F  72 6B 20 0A 00 00 01 00    ends2fo rk .....
144B0:  01 00 01 00 01 00 00 00  01 00 FF FF 01 00 FF FF   ........ ........
144C0:  00 00 FF FF FF FF 00 00  FF FF 01 00 FF FF 01 00   ........ ........
144D0:  00 00 01 00 01 00 8C 00  03 00 03 00 03 00 00 00   ........ ........
144E0:  70 72 65 5F 66 6F 6C 6C  6F 77 5F 6C 69 6E 65 3A   pre_foll ow_line:
144F0:  20 77 69 6E 64 6F 77 20  74 6F 6F 20 6C 61 72 67    window  too larg
14500:  65 3A 20 25 68 64 20 25  68 64 20 25 68 64 20 25   e: %hd % hd %hd %
14510:  68 64 20 0A 00 70 72 65  5F 66 6F 6C 6C 6F 77 5F   hd ..pre _follow_
14520:  6C 69 6E 65 3A 20 72 65  63 75 72 73 69 6F 6E 20   line: re cursion
14530:  6C 69 6D 69 74 2C 20 77  69 6E 64 6F 77 3A 20 25   limit, w indow: %
14540:  68 64 20 25 68 64 20 25  68 64 20 25 68 64 20 0A   hd %hd % hd %hd .
14550:  00 66 6F 6C 6C 6F 77 5F  6C 69 6E 65 3A 20 77 69   .follow_ line: wi
14560:  6E 64 6F 77 20 74 6F 6F  20 6C 61 72 67 65 3A 20   ndow too  large:
14570:  25 68 64 20 25 68 64 20  25 68 64 20 25 68 64 20   %hd %hd  %hd %hd
14580:  0A 00 66 6F 6C 6C 6F 77  5F 6C 69 6E 65 3A 20 72   ..follow _line: r
14590:  65 63 75 72 73 69 6F 6E  20 6C 69 6D 69 74 2C 20   ecursion  limit,
145A0:  77 69 6E 64 6F 77 3A 20  25 68 64 20 25 68 64 20   window:  %hd %hd
145B0:  25 68 64 20 25 68 64 20  0A 00 1E 00 66 6F 6C 6C   %hd %hd  ....foll
145C0:  6F 77 5F 6C 69 6E 65 3A  20 77 69 6E 64 6F 77 20   ow_line:  window
145D0:  74 6F 6F 20 6C 61 72 67  65 3A 20 25 68 64 20 25   too larg e: %hd %
145E0:  68 64 20 25 68 64 20 25  68 64 20 0A 00 66 6F 6C   hd %hd % hd ..fol
145F0:  6C 6F 77 5F 6C 69 6E 65  3A 20 72 65 63 75 72 73   low_line : recurs
14600:  69 6F 6E 20 6C 69 6D 69  74 2C 20 77 69 6E 64 6F   ion limi t, windo
14610:  77 3A 20 25 68 64 20 25  68 64 20 25 68 64 20 25   w: %hd % hd %hd %
14620:  68 64 20 0A 00 61 74 00  65 72 72 2E 6C 6F 67 00   hd ..at. err.log.
14630:  FF FF 00 00 FF FF 43 50  53 44 41 54 5C 00 25 73   ......CP SDAT\.%s
14640:  25 73 2E 63 70 73 00 77  62 00 25 73 25 73 2E 63   %s.cps.w b.%s%s.c
14650:  70 73 00 72 62 00 00 00  E4 01 00 00 00 00 05 C5   ps.rb... ........
14660:  01 B2 00 15 00 B0 5F 43  5F 46 49 4C 45 5F 49 4E   ......_C _FILE_IN
14670:  46 4F 3D 0D 00 B2 00 1C  00 B0 14 00 81 81 81 01   FO=..... ........
14680:  01 07 00 B2 00 19 00 B0  DB 08 1D 24 04 00 B2 00   ........ ...$....
14690:  0D 00 B0 FF FF FF FF 00  52 00 00 00 00 00 16 02   ........ R.......
146A0:  02 18 0D 09 0C 0C 0C 07  08 16 16 FF 02 0D 12 02   ........ ........
146B0:  FF 5C 00 5C 00 00 00 00  4F 1D 24 00 00 00 4F 1D   .\.\.... O.$...O.
146C0:  24 01 2F 00 B2 00 0B 00  B0 02 01 02 00 B2 00 0A   $./..... ........
146D0:  00 B0 02 02 02 00 B2 00  0A 00 B0 84 03 02 00 B2   ........ ........
146E0:  00 0A 00 B0 02 04 02 00  B2 00 B4 00 B0 01 00 00   ........ ........
146F0:  02 04 00 B2 00 EC 00 B0  F0 09 1D 24 04 00 B2 00   ........ ...$....
14700:  0C 00 B0 20 09 2D 0D 5D  00 5D 00 06 00 00 06 00   ... .-.] .]......
14710:  01 00 00 10 00 03 06 00  06 02 10 04 45 45 45 05   ........ ....EEE.
```

EXTRACT.DMP Thursday, January 6, 1994 12:02pm Page 98

```
14720: 05 05 05 05 35 30 00 50  00 00 00 00 20 20 30 50   ....50.P .... 0P
14730: 58 07 08 00 30 30 30 57  50 07 00 00 20 20 00 00   X...000W P... ..
14740: 00 00 00 08 60 60 60 60  60 60 00 00 70 70 78 78   ....```` ``..ppxx
14750: 78 78 08 07 08 00 00 07  00 08 08 08 00 00 08 00   xx...... ........
14760: 08 00 00 08 28 6E 75 6C  6C 29 06 68 00 B2 00 10   ....(nul l).h....
14770: 00 B0 03 00 00 20 C2 02  AB 10 C2 02 AB 10 C2 02   ..... .. ........
14780: AB 10 C2 02 AB 10 C2 02  AB 10 C2 02 AB 10 00 00   ........ ........
14790: 00 00 01 01 00 23 00 B2  20 09 00 B0 28 28 28 28   .....#.. ...((((
147A0: 28 05 00 B2 20 12 00 B0  48 01 00 B2 10 0F 00 B0   (... ... H.......
147B0: 84 0A 00 B0 10 10 10 10  10 10 10 81 81 81 81 81   ........ ........
147C0: 81 0D 00 B2 01 14 00 B0  10 10 10 10 10 10 82 82   ........ ........
147D0: 82 82 82 82 0C 00 B2 02  14 00 B0 10 10 10 10 20   ........ .......
147E0: 05 00 B2 00 81 00 B0 FF  FF 1E 00 3B 00 5A 00 78   ........ ...;.Z.x
147F0: 00 97 00 B5 00 D4 00 F3  00 11 01 30 01 4E 01 6D   ........ ...0.N.m
14800: 01 FF FF 1E 00 3A 00 59  00 77 00 96 00 B4 00 D3   .....:.Y .w......
14810: 00 F2 00 10 01 2F 01 4D  01 6C 01 54 5A 00 00 50   ...../.M .l.TZ..P
14820: 53 54 00 50 44 54 00 80  70 00 00 01 00 D0 0C 1D   ST.PDT.. p.......
14830: 24 D4 0C 1D 24 53 75 6E  4D 6F 6E 54 75 65 57 65   $...$Sun MonTueWe
14840: 64 54 68 75 46 72 69 53  61 74 00 4A 61 6E 46 65   dThuFriS at.JanFe
14850: 62 4D 61 72 41 70 72 4D  61 79 4A 75 6E 4A 75 6C   bMarAprM ayJunJul
14860: 41 75 67 53 65 70 4F 63  74 4E 6F 76 44 65 63 00   AugSepOc tNovDec.
14870: 00 00 00 00 00 E2 00 E2  00 E2 00 00 00 00 00 C1   ........ ........
14880: 13 9A 00 B2 00 0E 00 B0  12 0F AB 10 C2 13 1D 24   ........ .......$
14890: C2 13 C2 13 1D 24 1D 24  C2 13 C2 13 C2 13 1D 24   .....$.$ .......$
148A0: C2 13 1D 24 C2 13 62 23  C2 13 C2 13 C2 13 C2 13   ...$..b# ........
148B0: C2 13 C2 13 62 23 62 23  C2 13 C2 13 C2 13 1D 24   ....b#b# .......$
148C0: 1D 24 C2 13 C2 13 C2 13  C2 13 C2 13 C2 13 C2 13   .$...... ........
148D0: C2 13 1D 24 C2 13 C2 13  C2 13 62 23 C2 13 C2 13   ...$.... ..b#....
148E0: 1D 24 1D 24 1D 24 C2 13  C2 13 C2 13 1D 24 1D 24   .$.$.$.. .....$.$
148F0: 3C 3C 4E 4D 53 47 3E 3E  00 00 52 36 30 30 30 0D   <<NMSG>> ..R6000.
14900: 0A 2D 20 73 74 61 63 6B  20 6F 76 65 72 66 6C 6F   .- stack  overflo
14910: 77 0D 0A 00 03 00 52 36  30 30 33 0D 0A 2D 20 69   w.....R6 003..- i
14920: 6E 74 65 67 65 72 20 64  69 76 69 64 65 20 62 79   nteger d ivide by
14930: 20 30 0D 0A 00 09 00 52  36 30 30 39 0D 0A 2D 20    0.....R 6009..-
14940: 6E 6F 74 20 65 6E 6F 75  67 68 20 73 70 61 63 65   not enou gh space
14950: 20 66 6F 72 20 65 6E 76  69 72 6F 6E 6D 65 6E 74    for env ironment
14960: 0D 0A 00 FC 00 0D 0A 00  FF 00 72 75 6E 2D 74 69   ........ ..run-ti
14970: 6D 65 20 65 72 72 6F 72  20 00 02 00 52 36 30 30   me error  ...R600
14980: 32 0D 0A 2D 20 66 6C 6F  61 74 69 6E 67 2D 70 6F   2..- flo ating-po
14990: 69 6E 74 20 73 75 70 70  6F 72 74 20 6E 6F 74 20   int supp ort not
149A0: 6C 6F 61 64 65 64 0D 0A  00 01 00 52 36 30 30 31   loaded.. ...R6001
149B0: 0D 0A 2D 20 6E 75 6C 6C  20 70 6F 69 6E 74 65 72   ..- null  pointer
149C0: 20 61 73 73 69 67 6E 6D  65 6E 74 0D 0A 00 FF FF    assignm ent.....
149D0: FF 49 01 B2 00 07 00 B0  FF FF FF FF FF FF FF FF   .I...... ........
149E0: 18 00 AB 10 00 00 39 07  20 4E 2D 29 06 25 01 00   ......9.  N-).%..
149F0: 52 42 8C C0 05 10 00 0E  1F A3 04 00 03 06 0C 00   RB...... ........
14A00: 8E C0 8B 0E 06 00 8B F9  4F 8B F7 FD F3 A4 8B 16   ........ O.......
14A10: 0E 00 50 B8 38 00 50 CB  8C C3 8C D8 2B C2 8E D8   ..P.8.P. ....+...
14A20: 8E C0 BF 0F 00 B9 10 00  B0 FF F3 AE 47 8B F7 8B   ........ ....G...
14A30: C3 2B C2 8E C0 BF 0F 00  B1 04 8B C6 F7 D0 D3 E8   .+...... ........
14A40: 74 09 8C DA 2B D0 8E DA  83 CE F0 8B C7 F7 D0 D3   t...+... ........
14A50: E8 74 09 8C C2 2B D0 8E  C2 83 CF F0 AC 8A D0 4E   .t...+.. .......N
14A60: AD 8B C8 46 8A C2 24 FE  3C B0 75 06 AC F3 AA EB   ...F..$. <.u.....
14A70: 07 90 3C B2 75 6B F3 A4  8A C2 A8 01 74 BA BE 2D   ..<.uk.. ....t..-
```

```
14A80:  01 0E 1F 8B 1E 04 00 FC  33 D2 AD 8B C8 E3 13 8B   ........ 3.......
14A90:  C2 03 C3 8E C0 AD 8B F8  83 FF FF 74 11 26 01 1D   ........ ...t.&..
14AA0:  E2 F3 81 FA 00 F0 74 16  81 C2 00 10 EB DC 8C C0   ......t. ........
14AB0:  40 8E C0 83 EF 10 26 01  1D 48 8E C0 EB E2 8B C3   @.....&. .H......
14AC0:  8B 3E 08 00 8B 36 0A 00  03 F0 01 06 02 00 2D 10   .>...6.. ......-.
14AD0:  00 8E D8 8E C0 BB 00 00  FA 8E D6 8B E7 FB 2E FF   ........ ........
14AE0:  2F B4 40 BB 02 00 B9 16  00 8C CA 8E DA BA 17 01   /.@..... ........
14AF0:  CD 21 B8 FF 4C CD 21 50  61 63 6B 65 64 20 66 69   .!..L.!P acked fi
14B00:  6C 65 20 69 73 20 63 6F  72 72 75 70 74 52 02 1F   le is co rruptR..
14B10:  02 11 02 04 02 F7 01 EB  01 CF 01 C1 01 AB 01 87   ........ ........
14B20:  01 60 01 4F 01 46 01 34  01 25 01 F3 00 EB 00 D7   .`.O.F.4 .%......
14B30:  00 C5 00 B3 00 A6 00 9A  00 85 00 74 00 6B 00 58   ........ ...t.k.X
14B40:  00 4B 00 45 00 3D 00 2B  00 22 00 F4 03 E7 03 A4   .K.E.=.+ ."......
14B50:  04 83 04 5F 04 51 04 CA  06 06 07 F0 06 0F 08 F6   ..._.Q.. ........
14B60:  07 CA 07 AC 07 7D 07 5F  07 8D 08 7F 08 6C 08 5B   .....}._ .....l.[
14B70:  08 41 08 1F 0B FB 0A 69  0A 45 0A DC 0D CE 0C 1E   .A.....i .E......
14B80:  0C EA 0E 2D 10 12 10 E0  0F AE 0F 91 10 83 10 B6   ...-.... ........
14B90:  10 D6 10 FC 10 3F 14 E1  12 C3 12 B9 12 AF 12 97   .....?.. ........
14BA0:  12 8D 12 83 12 12 15 02  15 DB 14 C9 14 A5 14 69   ........ .......i
14BB0:  14 40 15 3C 16 20 16 13  16 EF 15 78 15 68 15 BE   .@.<. .. ...x.h..
14BC0:  17 AE 17 5C 17 49 17 39  17 29 17 11 17 EB 16 D0   ...\.I.9 .)......
14BD0:  16 A5 16 3B 18 E9 17 D6  17 CD 19 A7 19 8C 19 50   ...;.... .......P
14BE0:  19 3E 19 29 19 00 19 ED  18 DC 18 C9 18 B8 18 9F   .>.).... ........
14BF0:  18 A1 1A 86 1A 59 1A 91  1B 85 1B 70 1B 62 1B 23   .....Y.. ...p.b.#
14C00:  1B 09 1B FD 1A D8 1A E3  1B DE 1B D9 1B D1 1B CA   ........ ........
14C10:  1B C2 1B 36 1C 21 1C 0C  1C 74 1C 91 1C CD 1C F5   ...6.!.. .t......
14C20:  1C 09 1E D5 1D D9 1E 15  24 93 23 19 26 49 25 35   ........ $.#.&I%5
14C30:  25 56 28 2A 28 EE 27 C2  27 E3 26 17 2B BC 2E B5   %V(*(.'. '.&.+...
14C40:  2E 88 2E 81 2E 52 2E 4B  2E 1E 2E 17 2E E6 2D DF   .....R.K ......-.
14C50:  2D B2 2D AB 2D 3A 2C 10  2C E4 2B C0 2B 9A 33 B8   -.-.-:,. ,.+.+.3.
14C60:  33 63 36 45 36 06 3D D9  3C D2 3C A3 3C 9C 3C 6F   3c6E6.=. <.<.<.<o
14C70:  3C 68 3C 37 3C 30 3C 03  3C FC 3B 8B 3A 61 3A 35   <h<7<0<. <.;.:a:5
14C80:  3A 11 3A 0D 3D 8A 41 6C  41 B4 43 96 43 9B 44 72   :.:.=.Al A.C.C.Dr
14C90:  44 BA 4B 8E 4B 68 4B 33  4B 41 4A 2D 4A A2 49 93   D.K.KhK3 KAJ-J.I.
14CA0:  49 6E 49 DC 4B 05 4D E7  4C D5 4C D0 4C CB 4C BC   InI.K.M. L.L.L.L.
14CB0:  4C B7 4C 02 53 5C 57 45  5D E7 62 E0 62 92 62 44   L.L.S\WE ].b.b.bD
14CC0:  63 08 6B 30 6A EC 69 F3  6C EB 6C 7D 6F 41 70 30   c.k0j.i. l.l}oAp0
14CD0:  70 04 74 74 73 4D 76 58  75 D7 79 CF 79 B5 79 B0   p.ttsMvX u.y.y.y.
14CE0:  79 A1 79 9C 79 86 79 7E  79 24 7A 09 7A EC 79 38   y.y.y.y~ y$z.z.y8
14CF0:  7B DF 7A D8 7A FD 7B CE  7B 76 7E 5E 7F 4D 7F E6   {.z.z.{. {v~^.M..
14D00:  80 CD 80 54 80 3B 80 C5  7F 08 83 7A 84 41 84 71   ...T.;.. ...z.A.q
14D10:  85 3F 85 22 85 01 85 C8  84 85 86 AF 87 80 87 79   .?.".... .......y
14D20:  87 0C 87 05 87 0C 88 01  88 0F 89 EF 88 75 8A 53   ........ .....u.S
14D30:  8A 8F 89 84 8B 5F 8B AF  8D 92 8D 59 8D 46 8D 32   ....._.. ...Y.F.2
14D40:  8D 1C 8D 32 8F 27 8F 19  8F FE 8E DF 8E BD 8E A6   ...2.'.. ........
14D50:  8E 12 8E 71 8F 63 8F EB  8F CF 8F 30 90 73 90 C3   ...q.c.. ...0.s..
14D60:  90 BC 90 5D 92 4C 92 0E  92 81 91 3E 95 37 95 24   ...].L.. ...>.7.$
14D70:  95 10 94 3B 93 79 96 4E  96 0F 96 DA 95 CC 95 D5   ...;.y.N ........
14D80:  97 C8 97 8A 97 78 97 19  97 FA 96 D8 96 C1 96 77   .....x.. .......w
14D90:  9A 6A 9A FC 99 E5 99 BF  99 3E 99 A3 9A 9B 9A 7D   .j...... .>.....}
14DA0:  9D 53 9D F3 9C D7 9C AE  9C 73 9C 56 9C D6 9B CC   .S...... .s.V....
14DB0:  9D D0 9E C0 9E EF 9F 54  9F 71 A0 60 A0 B0 A2 86   .......T .q.`....
14DC0:  A2 59 A2 35 A2 10 A2 EE  A1 C9 A1 AF A1 9A A1 8F   .Y.5.... ........
14DD0:  A1 77 A1 61 A1 C5 A4 A5  A4 FB A2 01 A8 E6 A7 14   .w.a.... ........
```

```
14DE0:  A7 EB A6 BF A6 9C A6 80  A6 06 A6 1F A8 0B AD F0   ........ ........
14DF0:  AC BE AB A2 AB 17 AB 02  AB EF AA CF AA 9C AA CE   ........ ........
14E00:  B0 AC B0 95 B0 7B B0 5C  B0 3A B0 23 B0 09 B0 EA   .....{.\ .:.#....
14E10:  AF C8 AF B1 AF 97 AF 78  AF 56 AF 3F AF 64 AD 5D   .......x .V.?.d.]
14E20:  AD 44 B2 BE B1 7C B1 ED  B0 86 B3 61 B3 3F B3 21   .D...|.. ...a.?.!
14E30:  B3 00 B3 83 B2 65 B2 57  B5 4C B5 0F B5 E0 B4 D9   .....e.W .L......
14E40:  B4 5C B4 55 B4 55 B6 D5  B5 CA B5 8A B7 5C B7 3F   .\.U.U.. .....\.?
14E50:  B7 23 B7 FE B6 CF B9 74  BA AE BA 9E BA 00 BB 62   .#.....t .......b
14E60:  BB 52 BB 47 BB 3A BB 35  BB 2A BB 19 BB B5 BB A8   .R.G.:.5 .*......
14E70:  BB 9D BB 8D BB 85 BB 7C  BB EA BC 9C BC FC BB 78   .......| .......x
14E80:  BE 57 BE D0 BF CB BF BD  BF 8E BF 5D BF D7 C0 56   .W...... ...]...V
14E90:  C4 93 C7 80 C7 75 C7 5A  C7 4C C7 3A C7 2D C7 14   .....u.Z .L.:.-..
14EA0:  C7 06 C7 F4 C6 E7 C6 D4  C6 C6 C6 B4 C6 A7 C6 8E   ........ ........
14EB0:  C6 80 C6 6E C6 61 C6 1D  C6 ED C5 CB C5 9B C5 6B   ...n.a.. .......k
14EC0:  C5 B7 CA AF CF 7D CF 26  CF FC CE D4 CE 9B CE 63   .....}.& .......c
14ED0:  CE 45 CE 73 D0 55 D0 2D  D0 02 D3 D7 D1 FF D0 D4   .E.s.U.- ........
14EE0:  D0 B8 D3 A2 D3 17 D9 EE  D8 90 D8 45 D8 05 D8 E1   ........ ...E....
14EF0:  D7 BC D7 9C D7 74 D7 38  D7 0E D7 F0 D6 3A DA 1D   .....t.8 .....:..
14F00:  DA F6 D9 E3 D9 D0 D9 B1  D9 89 D9 55 D9 33 D9 B5   ........ ...U.3..
14F10:  DB 94 DB 6C DB 32 DB 08  DB EA DA 1F DE 0C DE F9   ...l.2.. ........
14F20:  DD DA DD BF DD 9D DD 72  DD 49 DD F9 DC AE DC 90   .......r .I......
14F30:  DC 5A DC 3B DC 20 DC FE  DB DA DB 63 DE 46 DE EB   .Z.;. .. ...c.F..
14F40:  DE B9 DE EA E0 A9 E1 05  E1 60 E6 C8 E5 58 E8 72   ........ .`...X.r
14F50:  E7 C3 E9 AC EA 35 EC 42  EB DE F0 C4 F0 A8 F0 91   .....5.B ........
14F60:  F0 74 F0 69 F0 49 F0 26  F0 7F F1 C0 F2 61 F3 B5   .t.i.I.& .....a..
14F70:  F4 89 F4 52 F4 03 F6 E5  F5 D0 F5 C2 F5 A4 F5 8F   ...R.... ........
14F80:  F5 6E F5 5C F5 0C F5 FA  F4 EF F4 DA F4 A6 F7 90   .n.\.... ........
14F90:  F7 70 F7 59 F8 3F F8 23  F8 0C F8 B8 FA 82 FA 5A   .p.Y.?.# .......Z
14FA0:  FA 33 FA 15 FA 3D FB 2C  FB 1C FB 06 FB FA FA EA   .3...=., ........
14FB0:  FA DA FA 64 00 8E 02 20  02 C6 01 8B 03 6A 03 33   ...d...  .....j.3
14FC0:  03 E9 02 D8 02 7E 07 5B  07 38 07 CE 07 AB 07 31   .....~.[ .8.....1
14FD0:  08 F6 07 EB 07 97 08 5C  08 51 08 13 09 F0 08 CD   .......\ .Q......
14FE0:  08 69 09 46 09 0A 0A FA  09 D8 09 AF 09 9C 09 97   .i.F.... ........
14FF0:  0A 83 0A 50 0A 3D 0A A7  0A D6 0A 64 0B 69 0B 70   ...P.=.. ...d.i.p
15000:  0B 8B 0B C5 0B 10 3C E6  0C 7F 10 9A 11 8D 11 73   ......<. .......s
15010:  11 52 11 36 11 11 11 FB  11 E0 11 BB 11 33 15 6A   .R.6.... .....3.j
15020:  15 17 17 42 17 27 18 E4  18 F5 19 98 19 D3 1B 1F   ...B.'.. ........
15030:  1A E6 1E D4 1E 46 1E 2D  22 0F 22 34 2C 43 2D 49   .....F.- "."4,C-I
15040:  2D EF 2E 07 32 E6 31 C9  31 E2 32 B9 32 68 33 44   -...2.1. 1.2.2h3D
15050:  33 B7 33 9C 33 E8 33 C7  35 A9 35 2F 35 16 35 09   3.3.3.3. 5.5/5.5.
15060:  35 F8 34 E5 34 A9 36 5C  36 52 36 3A 36 0B 36 F4   5.4.4.6\ 6R6:6.6.
15070:  35 8B 38 4D 38 3A 38 27  38 FF 37 D0 37 40 00 14   5.8M8:8' 8.7.7@..
15080:  4F 16 4F 18 4F 1A 4F 1C  4F 1E 4F 20 4F 22 4F 24   O.O.O.O. O.O O"O$
15090:  4F 26 4F 28 4F 2A 4F 2C  4F 2E 4F 30 4F 32 4F 34   O&O(O*O, O.O0O2O4
150A0:  4F 36 4F 38 4F 3A 4F 3C  4F 3E 4F 40 4F 42 4F 44   O6O8O:O< O>O@OBOD
150B0:  4F 46 4F 48 4F 4A 4F 4C  4F 4E 4F 50 4F 52 4F 54   OFOHOJOL ONOPOROT
150C0:  4F 56 4F 58 4F 5A 4F 5C  4F 5E 4F 60 4F 62 4F 64   OVOXOZO\ O^O`ObOd
150D0:  4F 66 4F 68 4F 6A 4F 6C  4F 6E 4F 70 4F 72 4F 74   OfOhOjOl OnOpOrOt
150E0:  4F 00 4F A9 4A 12 4F E4  4A DE 4A BE 4C 76 4F 4A   O.O.J.O. J.J.LvOJ
150F0:  4D 4E 4D 52 4D 56 4D 5A  4D 5E 4D B4 4E B0 4E 00   MNMRMVMZ M^M.N.N.
15100:  00 00 00 00 00 00 00 00  00 00 00 00 00 00 00 00   ........ ........
15110:  00 00 00 00 00 00 00 00  00                        ........ .
```


## APPENDIX C

```
PSA Binary File Dump utility version 1.9
Copyright (C) 1984 by Phoenix Software Associates, Ltd.

                          Dump of MATCH.PCK
   0:  4D 5A 71 01 76 00 00 00  20 00 2C 15 FF FF 25 1F   MZq.v... .,...%.
  10:  80 00 00 00 12 00 2E 0E  1E 00 00 00 01 00 00 00   ........ ........
  20:  00 00 00 00 00 00 00 00  00 00 00 00 00 00 00 00   ........ ........
  30:  00 00 00 00 00 00 00 00  00 00 00 00 00 00 00 00   ........ ........
  40:  00 00 00 00 00 00 00 00  00 00 00 00 00 00 00 00   ........ ........
  50:  00 00 00 00 00 00 00 00  00 00 00 00 00 00 00 00   ........ ........
  60:  00 00 00 00 00 00 00 00  00 00 00 00 00 00 00 00   ........ ........
  70:  00 00 00 00 00 00 00 00  00 00 00 00 00 00 00 00   ........ ........
  80:  00 00 00 00 00 00 00 00  00 00 00 00 00 00 00 00   ........ ........
  90:  00 00 00 00 00 00 00 00  00 00 00 00 00 00 00 00   ........ ........
  A0:  00 00 00 00 00 00 00 00  00 00 00 00 00 00 00 00   ........ ........
  B0:  00 00 00 00 00 00 00 00  00 00 00 00 00 00 00 00   ........ ........
  C0:  00 00 00 00 00 00 00 00  00 00 00 00 00 00 00 00   ........ ........
  D0:  00 00 00 00 00 00 00 00  00 00 00 00 00 00 00 00   ........ ........
  E0:  00 00 00 00 00 00 00 00  00 00 00 00 00 00 00 00   ........ ........
  F0:  00 00 00 00 00 00 00 00  00 00 00 00 00 00 00 00   ........ ........
 100:  00 00 00 00 00 00 00 00  00 00 00 00 00 00 00 00   ........ ........
 110:  00 00 00 00 00 00 00 00  00 00 00 00 00 00 00 00   ........ ........
 120:  00 00 00 00 00 00 00 00  00 00 00 00 00 00 00 00   ........ ........
 130:  00 00 00 00 00 00 00 00  00 00 00 00 00 00 00 00   ........ ........
 140:  00 00 00 00 00 00 00 00  00 00 00 00 00 00 00 00   ........ ........
 150:  00 00 00 00 00 00 00 00  00 00 00 00 00 00 00 00   ........ ........
 160:  00 00 00 00 00 00 00 00  00 00 00 00 00 00 00 00   ........ ........
 170:  00 00 00 00 00 00 00 00  00 00 00 00 00 00 00 00   ........ ........
 180:  00 00 00 00 00 00 00 00  00 00 00 00 00 00 00 00   ........ ........
 190:  00 00 00 00 00 00 00 00  00 00 00 00 00 00 00 00   ........ ........
 1A0:  00 00 00 00 00 00 00 00  00 00 00 00 00 00 00 00   ........ ........
 1B0:  00 00 00 00 00 00 00 00  00 00 00 00 00 00 00 00   ........ ........
 1C0:  00 00 00 00 00 00 00 00  00 00 00 00 00 00 00 00   ........ ........
 1D0:  00 00 00 00 00 00 00 00  00 00 00 00 00 00 00 00   ........ ........
 1E0:  00 00 00 00 00 00 00 00  00 00 00 00 00 00 00 00   ........ ........
 1F0:  00 00 00 00 00 00 00 00  00 00 00 00 00 00 00 00   ........ ........
 200:  55 8B EC 81 EC 10 00 57  56 8E 06 AA 0A 26 C7 06   U......W V....&..
 210:  80 01 01 00 B8 42 00 1E  50 9A 96 0A E5 0A 83 C4   .....B.. P.......
 220:  04 8D 46 F8 16 50 B9 7E  00 1E 51 9A DA 0A E5 0A   ..F..P.~ ..Q.....
 230:  83 C4 08 8D 46 F8 16 50  9A BC 28 E5 0A 83 C4 04   ....F..P ..(.....
 240:  B8 81 00 1E 50 8D 46 F8  16 50 9A 0C 26 E5 0A 83   ....P.F. .P..&...
 250:  C4 08 3D 00 00 74 03 E9  03 00 E9 AE 00 B8 AA 89   ..=..t.. ........
 260:  B9 9E 0D 51 50 8D 46 F8  16 50 9A 05 03 AB 0A 83   ...QP.F. .P......
 270:  C4 08 3D 00 00 75 03 E9  15 00 8D 46 F8 16 50 B8   ..=..u.. ...F..P.
 280:  86 00 1E 50 9A 96 0A E5  0A 83 C4 08 E9 85 FF 8D   ...P.... ........
 290:  46 F0 16 50 B9 96 00 1E  51 9A DA 0A E5 0A 83 C4   F..P.... Q.......
 2A0:  08 8D 46 F0 16 50 9A BC  28 E5 0A 83 C4 04 B8 60   ..F..P.. (......`
 2B0:  00 B9 9E 0D 51 50 8D 46  F0 16 50 9A 05 03 AB 0A   ....QP.F ..P.....
 2C0:  83 C4 08 3D 00 00 75 03  E9 15 00 8D 46 F0 16 50   ...=..u. ....F..P
 2D0:  B8 99 00 1E 50 9A 96 0A  E5 0A 83 C4 08 E9 34 FF   ....P... ......4.
 2E0:  9A 08 00 11 00 48 74 03  E9 10 00 B8 A9 00 1E 50   .....Ht. .......P
 2F0:  9A 96 0A E5 0A 83 C4 04  E9 0D 00 B8 B4 00 1E 50   ........ .......P
 300:  9A 96 0A E5 0A 83 C4 04  E9 09 FF B8 00 00 E9 00   ........ ........
 310:  00 5E 5F 8B E5 5D CB 00  55 8B EC 81 EC 0A 00 57   .^_..].. U......W
```

MATCH.DMP Thursday, January 6, 1994 12:04pm Page 2

```
320:  56 C7 46 FC 02 00 C7 46  FE 1A 00 8E 06 AC 0A 26   V.F....F .......&
330:  83 3E 4A 00 01 75 03 E9  0C 00 B8 00 00 50 9A 0C   .>J..u.. .....P..
340:  00 85 06 83 C4 02 8E 06  AE 0A 26 C7 06 80 01 01   ........ ..&.....
350:  00 B8 F6 87 B9 9E 0D 51  50 B8 AA 89 B9 9E 0D 51   .......Q P......Q
360:  50 9A C9 18 E8 03 83 C4  08 B8 28 00 B9 9E 0D 51   P....... ..(....Q
370:  50 B8 60 00 B9 9E 0D 51  50 9A C9 18 E8 03 83 C4   P.`....Q P.......
380:  08 8E 06 B0 0A 06 BF 52  89 BE C2 00 B9 2B 00 F3   .......R .....+..
390:  A5 07 B8 00 00 89 46 FA  26 A3 A6 89 26 83 3E 80   ......F. &...&.>.
3A0:  89 00 74 03 E9 2D 00 06  1E BF 90 89 BE 9C 89 06   ..t..-.. ........
3B0:  1F B9 06 00 F3 A5 1F 07  C7 46 F6 90 89 8C 46 F8   ........ .F....F.
3C0:  8B 46 F6 8B 56 F8 1E BF  84 89 8B F0 8E DA B9 06   .F..V... ........
3D0:  00 F3 A5 1F B8 01 00 50  9A 1C 0B 73 08 83 C4 02   .......P ...s....
3E0:  B8 00 00 50 9A 1C 0B 73  08 83 C4 02 9A 02 00 E8   ...P...s ........
3F0:  03 8E 06 B0 0A 26 83 3E  62 89 00 74 03 E9 06 00   .....&.> b..t....
400:  B8 FF FF E9 98 00 9A 55  03 11 00 9A 8B 12 7C 02   .......U ......|.
410:  9A D5 12 85 06 9A 75 16  85 06 9A 3C 17 85 06 9A   ......u. ...<....
420:  99 18 85 06 9A EA 0A 85  06 89 46 FA 8E 06 B2 0A   ........ ..F.....
430:  26 83 3E 40 01 01 74 03  E9 4B 00 8E 06 B0 0A 26   &.>@..t. .K.....&
440:  83 3E A6 89 00 7C 03 E9  3C 00 26 83 3E 80 89 00   .>...|.. <.&.>...
450:  74 03 E9 11 00 06 1E BF  84 89 BE 9C 89 06 1F B9   t....... ........
460:  06 00 F3 A5 1F 07 8E 06  B0 0A 26 83 3E 80 89 01   ........ ..&.>...
470:  74 03 E9 11 00 06 1E BF  90 89 BE 9C 89 06 1F B9   t....... ........
480:  06 00 F3 A5 1F 07 83 7E  FA 00 7F 03 E9 09 00 B8   .......~ ........
490:  01 00 E9 09 00 E9 06 00  B8 FF FF E9 00 00 5E 5F   ........ ......^_
4A0:  8B E5 5D CB 55 8B EC 81  EC 00 00 57 56 C7 06 08   ..].U... ...WV...
4B0:  0C 60 00 C7 06 0A 0C 9E  0D C7 06 0C 0C AA 89 C7   .`...... ........
4C0:  06 0E 0C 9E 0D 5E 5F 8B  E5 5D CB 55 8B EC 81 EC   .....^_. .].U....
4D0:  04 00 57 56 B8 F6 87 B9  9E 0D 51 50 BA AA 89 BB   ..WV.... ..QP....
4E0:  9E 0D 53 52 9A DE 1B E8  03 83 C4 08 B8 28 00 B9   ..SR.... .....(..
4F0:  9E 0D 51 50 B8 60 00 BA  9E 0D 52 50 9A DE 1B E8   ..QP.`.. ..RP....
500:  03 83 C4 08 8E 06 B4 0A  26 A1 0E 88 8E 06 B6 0A   ........ &.......
510:  26 2B 06 40 00 89 46 FE  83 7E FE 00 7F 03 E9 23   &+.@..F. .~.....#
520:  00 8B 46 FE F7 D8 50 B8  00 00 50 B9 F6 87 BA 9E   ..F...P. ..P.....
530:  0D 52 51 B9 AA 89 BA 9E  0D 52 51 50 9A 4F 20 E8   .RQ..... .RQP.O .
540:  03 83 C4 0E 83 7E FE 00  7C 03 E9 23 00 FF 76 FE   .....~.. |..#..v.
550:  B8 00 00 50 B8 28 00 B9  9E 0D 51 50 B8 60 00 B9   ...P.(.. ..QP.`..
560:  9E 0D 51 50 B8 01 00 50  9A 4F 20 E8 03 83 C4 0E   ..QP...P .O .....
570:  8E 06 B4 0A 26 A1 10 88  8E 06 B6 0A 26 2B 06 42   ....&... ....&+.B
580:  00 89 46 FC 83 7E FC 00  7F 03 E9 20 00 FF 76 FC   ..F..~.. ... ..v.
590:  B8 02 00 50 B8 28 00 06  50 B8 60 00 B9 9E 0D 51   ...P.(.. P.`....Q
5A0:  50 B8 01 00 50 9A 4F 20  E8 03 83 C4 0E 83 7E FC   P...P.O  ......~.
5B0:  00 7C 03 E9 26 00 8B 46  FC F7 D8 50 B8 02 00 50   .|..&..F ...P...P
5C0:  B8 F6 87 B9 9E 0D 51 50  B8 AA 89 B9 9E 0D 51 50   ......QP ......QP
5D0:  B8 00 00 50 9A 4F 20 E8  03 83 C4 0E 5E 5F 8B E5   ...P.O . ....^_..
5E0:  5D CB 55 8B EC 81 EC 02  00 57 56 C7 46 FE 00 00   ].U..... .WV.F...
5F0:  E9 03 00 FF 46 FE 8E 06  B8 0A 8B 46 FE 26 39 06   ....F... ...F.&9.
600:  62 00 7F 03 E9 1E 00 B8  1A 00 8B 5E FE 8B CB D1   b....... ...^....
610:  E3 03 D9 D1 E3 26 F7 AF  5A 53 8B D8 26 83 A7 2E   .....&.. ZS..&...
620:  02 F9 E9 CE FF C7 46 FE  00 00 E9 03 00 FF 46 FE   ......F. ......F.
630:  8E 06 BA 0A 8B 46 FE 26  39 06 AC 89 7F 03 E9 1E   .....F.& 9.......
640:  00 B8 1A 00 8B 5E FE 8B  CB D1 E3 03 D9 D1 E3 26   .....^.. .......&
650:  F7 AF A4 DC 8B D8 26 83  A7 78 8B F9 E9 CE FF 5E   ......&. .x.....^
660:  5F 8B E5 5D CB 55 8B EC  81 EC 14 00 57 56 9A 94   _..].U.. ....WV..
670:  01 11 00 8E 06 BC 0A 26  83 3E 76 01 00 75 03 E9   .......& .>v..u..
```

```
MATCH.DMP            Thursday, January  6, 1994  12:04pm                Page 3

680:  1B 00 B8 F6 87 B9 9E 0D  51 50 B8 AA 89 B9 9E 0D   ........ QP......
690:  51 50 9A 33 17 E8 03 83  C4 08 E9 18 00 B8 28 00   QP.3.... ......(.
6A0:  B9 9E 0D 51 50 B8 60 00  B9 9E 0D 51 50 9A 33 17   ...QP.`. ...QP.3.
6B0:  E8 03 83 C4 08 9A BB 01  11 00 9A D2 02 11 00 C7   ........ ........
6C0:  46 F0 00 00 E9 03 00 FF  46 F0 C4 1E 08 0C 8B 46   F....... F......F
6D0:  F0 26 39 07 7F 03 E9 CE  02 C7 46 FA FF FF 8B 76   .&9..... ..F....v
6E0:  F0 D1 E6 C4 1E 08 0C 26  8B 40 26 89 46 F8 B8 01   .......& .@&.F...
6F0:  00 50 8D 46 F8 16 50 8D  46 FA 16 50 A1 08 0C 8B   .P.F..P. F..P....
700:  16 0A 0C 05 B6 01 52 50  9A 97 24 11 00 83 C4 0E   ......RP ..$.....
710:  40 74 03 E9 03 00 E9 AE  FF 8E 06 BE 0A 26 83 3E   @t...... .....&.>
720:  82 01 00 75 03 E9 40 00  8E 06 B0 0A 26 83 3E 82   ...u..@. ....&.>.
730:  89 00 74 03 E9 31 00 B8  1A 00 F7 6E FA 8B F0 C4   ..t..1.. ...n....
740:  1E 08 0C 26 F6 80 CE 01  80 75 03 E9 17 00 B8 1A   ...&.... .u......
750:  00 F7 6E F8 8B F0 C4 1E  08 0C 26 F6 80 CE 01 80   ..n..... ..&.....
760:  74 03 E9 03 00 E9 5F FF  B8 FF FF 89 46 F4 89 46   t....._. ....F..F
770:  F6 C7 46 EE 00 00 8D 46  F2 16 50 8D 46 F4 16 50   ..F....F ..P.F..P
780:  8D 4E F6 16 51 FF 76 F8  FF 76 FA 9A E7 0C 11 00   .N..Q.v. .v......
790:  83 C4 10 3D 00 00 75 03  E9 DB 01 FF 76 F4 FF 76   ...=..u. ....v..v
7A0:  F6 FF 76 F8 FF 76 FA 9A  FC 08 11 00 83 C4 08 FF   ..v..v.. ........
7B0:  76 F4 FF 76 F6 A1 0C 0C  8B 16 0E 0C 05 26 00 52   v..v.... .....&.R
7C0:  50 A1 0C 0C 8B 16 0E 0C  05 B6 01 52 50 FF 76 F8   P....... ...RP.v.
7D0:  FF 76 FA A1 08 0C 8B 16  0A 0C 05 26 00 52 50 A1   .v...... ...&.RP.
7E0:  08 0C 8B 16 0A 0C 05 B6  01 52 50 9A 53 24 11 00   ........ .RP.S$..
7F0:  83 C4 18 B8 1A 00 F7 6E  FA 8B F0 C4 1E 08 0C 26   .......n .......&
800:  F6 80 CE 01 08 74 03 E9  5F 00 B8 1A 00 F7 6E F6   .....t.. _.....n.
810:  8B F0 C4 1E 0C 0C 26 F6  80 CE 01 08 75 03 E9 48   ......&. ....u..H
820:  00 B8 1A 00 F7 6E F6 8B  F0 C4 1E 0C 0C 26 8A 80   .....n.. .....&..
830:  CE 01 24 06 3C 06 72 03  E9 2E 00 FF 76 F4 FF 76   ..$.<.r. ....v..v
840:  F6 A1 0C 0C 8B 16 0E 0C  05 B6 01 52 50 A1 0C 0C   ........ ...RP...
850:  8B 16 0E 0C 05 26 00 52  50 FF 36 0E 0C FF 36 0C   .....&.R P.6...6.
860:  0C 9A 16 11 11 00 83 C4  10 B8 1A 00 F7 6E FA 8B   ........ .....n..
870:  F0 C4 1E 08 0C 26 F6 80  CE 01 08 75 03 E9 62 00   .....&.. ...u..b.
880:  B8 1A 00 F7 6E F6 8B F0  C4 1E 0C 0C 26 F6 80 CE   ....n... ....&...
890:  01 08 74 03 E9 4B 00 B8  1A 00 F7 6E FA 8B F0 C4   ..t..K.. ...n....
8A0:  1E 08 0C 26 8A 80 CE 01  24 06 3C 06 72 03 E9 31   ...&.... $.<.r..1
8B0:  00 FF 76 F8 FF 76 FA A1  08 0C 8B 16 0A 0C 05 B6   ..v..v.. ........
8C0:  01 52 50 A1 08 0C 8B 16  0A 0C 05 26 00 52 50 FF   .RP..... ...&.RP.
8D0:  36 0A 0C FF 36 08 0C 9A  16 11 11 00 83 C4 10 FF   6...6... ........
8E0:  4E F0 C7 46 FC 00 00 8D  46 F4 16 50 8D 46 F6 16   N..F.... F..P.F..
8F0:  50 8D 46 F8 16 50 8D 46  FA 16 50 9A A3 06 11 00   P.F..P.F ..P.....
900:  83 C4 10 40 74 03 E9 03  00 E9 5B 00 FF 76 F4 FF   ...@t... ..[..v..
910:  76 F6 FF 76 F8 FF 76 FA  9A 88 1E 11 00 83 C4 08   v..v..v. ........
920:  3D 00 00 74 03 E9 03 00  E9 3C 00 8E 06 B0 0A 26   =..t.... .<.....&
930:  FF 06 70 89 FF 46 FC 26  FF 06 78 89 8B 46 FC 26   ..p..F.& ..x..F.&
940:  39 06 72 89 7C 03 E9 07  00 8B 46 FC 26 A3 72 89   9.r.|... ..F.&.r.
950:  FF 76 F4 FF 76 F6 FF 76  F8 FF 76 FA 9A FC 08 11   .v..v..v ..v.....
960:  00 83 C4 08 E9 80 FF 83  7E F8 FF 74 03 E9 03 00   ........ ~..t....
970:  E9 03 00 E9 00 FE B8 01  00 50 8D 46 F8 16 50 8D   ........ .P.F..P.
980:  46 FA 16 50 A1 08 0C 8B  16 0A 0C 05 B6 01 52 50   F..P.... ......RP
990:  9A 97 24 11 00 83 C4 0E  40 74 03 E9 03 00 E9 03   ..$..... @t......
9A0:  00 E9 CD FD E9 20 FD B8  00 00 E9 00 00 5E 5F 8B   ..... .. .....^_.
9B0:  E5 5D CB 55 8B EC 81 EC  00 00 57 56 B8 1A 00 C4   .].U.... ..WV....
9C0:  5E 0A 26 F7 2F 8B F0 C4  1E 08 0C 26 F6 80 CE 01   ^.&./... ...&....
9D0:  08 75 03 E9 4E 00 B8 1A  00 C4 5E 12 26 F7 2F 8B   .u..N... ..^.&./.
```

```
9E0:  F0 C4 1E 0C 0C 26 F6 80  CE 01 08 74 03 E9 34 00   .....&.. ...t..4.
9F0:  C4 5E 06 26 FF 37 C4 5E  0A 26 FF 37 A1 08 0C 8B   .^.&.7.^ .&.7....
A00:  16 0A 0C 05 B6 01 52 50  A1 08 0C 8B 16 0A 0C 05   ......RP ........
A10:  26 00 52 50 FF 36 0A 0C  FF 36 08 0C 9A 16 11 11   &.RP.6.. .6......
A20:  00 83 C4 10 B8 1A 00 C4  5E 0A 26 F7 2F 8B F0 C4   ........ ^.&./...
A30:  1E 08 0C 26 F6 80 CE 01  08 74 03 E9 6B 00 B8 1A   ...&.... .t..k...
A40:  00 C4 5E 12 26 F7 2F 8B  F0 C4 1E 0C 0C 26 F6 80   ..^.&./. .....&..
A50:  CE 01 08 75 03 E9 51 00  B8 1A 00 C4 5E 12 26 F7   ...u..Q. ....^.&.
A60:  2F 8B F0 C4 1E 0C 0C 26  8A 80 CE 01 24 06 3C 06   /......& ....$.<.
A70:  72 03 E9 34 00 C4 5E 0E  26 FF 37 C4 5E 12 26 FF   r..4..^. &.7.^.&.
A80:  37 A1 0C 0C 8B 16 0E 0C  05 B6 01 52 50 A1 0C 0C   7....... ...RP...
A90:  8B 16 0E 0C 05 26 00 52  50 FF 36 0E 0C FF 36 0C   .....&.R P.6...6.
AA0:  0C 9A 16 11 11 00 83 C4  10 B8 01 00 50 FF 76 0C   ........ ....P.v.
AB0:  FF 76 0A FF 76 08 FF 76  06 A1 08 0C 8B 16 0A 0C   .v..v..v ........
AC0:  05 B6 01 52 50 9A 97 24  11 00 83 C4 0E 40 74 03   ...RP..$ .....@t.
AD0:  E9 06 00 B8 FF FF E9 36  00 B8 01 00 50 FF 76 14   .......6 ....P.v.
AE0:  FF 76 12 FF 76 10 FF 76  0E A1 0C 0C 8B 16 0E 0C   .v..v..v ........
AF0:  05 B6 01 52 50 9A 97 24  11 00 83 C4 0E 40 74 03   ...RP..$ .....@t.
B00:  E9 06 00 B8 FF FF E9 06  00 B8 00 00 E9 00 00 5E   ........ .......^
B10:  5F 8B E5 5D CB 55 8B EC  81 EC 04 00 57 56 C7 46   _..].U.. ....WV.F
B20:  FE 01 00 C7 46 FC 01 00  B8 1A 00 C4 5E 0A 26 F7   ....F... ....^.&.
B30:  2F 8B F0 C4 1E 08 0C 26  83 B8 CA 01 FF 75 03 E9   /......& .....u..
B40:  1F 00 B8 1A 00 C4 5E 12  26 F7 2F 8B F0 C4 1E 0C   ......^. &./.....
B50:  0C 26 83 B8 CA 01 FF 74  03 E9 05 00 C7 46 FE 00   .&.....t .....F..
B60:  00 B8 1A 00 C4 5E 0A 26  F7 2F 8B F0 C4 1E 08 0C   .....^.& ./......
B70:  26 83 B8 CA 01 FF 74 03  E9 1F 00 B8 1A 00 C4 5E   &.....t. .......^
B80:  12 26 F7 2F 8B F0 C4 1E  0C 0C 26 83 B8 CA 01 FF   .&./.... ..&.....
B90:  75 03 E9 05 00 C7 46 FC  00 00 FF 76 FE FF 76 0C   u.....F. ...v..v.
BA0:  FF 76 0A FF 76 08 FF 76  06 A1 08 0C 8B 16 0A 0C   .v..v..v ........
BB0:  05 B6 01 52 50 9A 97 24  11 00 83 C4 0E 40 74 03   ...RP..$ .....@t.
BC0:  E9 0E 00 C4 5E 0A 26 C7  07 FF FF B8 FF FF E9 35   ....^.&. .......5
BD0:  00 FF 76 FC FF 76 14 FF  76 12 FF 76 10 FF 76 0E   ..v..v.. v..v..v.
BE0:  A1 0C 0C 8B 16 0E 0C 05  B6 01 52 50 9A 97 24 11   ........ ..RP..$.
BF0:  00 83 C4 0E 40 74 03 E9  06 00 B8 FE FF E9 06 00   ....@t.. ........
C00:  B8 00 00 E9 00 00 5E 5F  8B E5 5D CB 55 8B EC 81   ......^_ ..].U...
C10:  EC 08 00 57 56 B8 1A 00  F7 6E 0A 8B F0 C4 1E 0C   ...WV... .n......
C20:  0C 26 8A 80 CE 01 04 02  8B C8 B8 1A 00 F7 6E 0A   .&...... ......n.
C30:  8B F0 C4 1E 0C 0C 26 32  88 CE 01 83 E1 06 B8 1A   ......&2 ........
C40:  00 F7 6E 0A 8B F0 C4 1E  0C 0C 26 31 88 CE 01 B8   ..n..... ..&1....
C50:  1A 00 F7 6E 0C 8B F0 C4  1E 0C 0C 26 8A 80 CE 01   ...n.... ...&....
C60:  04 02 8B C8 B8 1A 00 F7  6E 0C 8B F0 C4 1E 0C 0C   ........ n.......
C70:  26 32 88 CE 01 83 E1 06  B8 1A 00 F7 6E 0C 8B F0   &2...... ....n...
C80:  C4 1E 0C 0C 26 31 88 CE  01 B8 1A 00 F7 6E 06 8B   ....&1.. .....n..
C90:  F0 C4 1E 08 0C 26 8A 80  CE 01 04 02 8B C8 B8 1A   .....&.. ........
CA0:  00 F7 6E 06 8B F0 C4 1E  08 0C 26 32 88 CE 01 83   ..n..... ..&2....
CB0:  E1 06 B8 1A 00 F7 6E 06  8B F0 C4 1E 08 0C 26 31   ......n. ......&1
CC0:  88 CE 01 B8 1A 00 F7 6E  08 8B F0 C4 1E 08 0C 26   .......n .......&
CD0:  8A 80 CE 01 04 02 8B C8  B8 1A 00 F7 6E 08 8B F0   ........ ....n...
CE0:  C4 1E 08 0C 26 32 88 CE  01 83 E1 06 B8 1A 00 F7   ....&2.. ........
CF0:  6E 08 8B F0 C4 1E 08 0C  26 31 88 CE 01 B8 1A 00   n....... &1......
D00:  F7 6E 06 8B F0 C4 1E 08  0C 26 8A 80 CE 01 24 06   .n...... .&....$.
D10:  3C 04 73 03 E9 09 00 8E  06 B0 0A 26 FF 06 6A 89   <.s..... ...&..j.
D20:  B8 1A 00 F7 6E 08 8B F0  C4 1E 08 0C 26 8A 80 CE   ....n... ....&...
D30:  01 24 06 3C 04 73 03 E9  09 00 8E 06 B0 0A 26 FF   .$.<.s.. ......&.
```

```
 D40:  06 6A 89 8E 06 B0 0A 26  FF 06 66 89 26 FF 06 78   .j.....& ..f.&..x
 D50:  89 B8 1A 00 F7 6E 08 8B  F0 C4 1E 08 0C 26 8B 80   .....n.. .....&..
 D60:  C4 01 89 46 FE B8 1A 00  F7 6E 08 8B F0 C4 1E 08   ...F.... .n......
 D70:  0C B8 1A 00 F7 6E 06 8B  F8 8B C3 8C C1 C4 1E 08   .....n.. ........
 D80:  0C 8C C2 8E C1 8B CB 8B  D8 26 8B 80 B8 01 8E C2   ........ .&......
 D90:  8B D9 26 2B 81 B8 01 F7  D8 99 52 50 52 50 9A FA   ..&+.... ..RPRP..
 DA0:  2A E5 0A 8B C8 B8 1A 00  8B DA F7 6E 08 8B F0 8B   *....... ...n....
 DB0:  C3 C4 1E 08 0C 8B D0 B8  1A 00 8B FA F7 6E 06 8B   ........ .....n..
 DC0:  D6 8B F0 8B C3 C4 1E 08  0C 26 8B 80 B6 01 8B F2   ........ .&......
 DD0:  C4 1E 08 0C 26 2B 80 B6  01 99 52 50 52 50 8B F1   ....&+.. ..RPRP..
 DE0:  9A FA 2A E5 0A 03 F0 13  FA 57 56 9A 3A 01 42 08   ..*..... .WV.:.B.
 DF0:  83 C4 04 89 46 F8 8B 46  F8 3D 01 00 7C 03 E9 03   ....F..F .=..|...
 E00:  00 B8 01 00 99 52 50 B8  E8 03 F7 6E FE 52 50 9A   .....RP. ...n.RP.
 E10:  60 2A E5 0A 89 46 FA 81  7E FE 96 00 7F 03 E9 13   `*...F.. ........
 E20:  00 81 7E FA D0 07 7D 03  E9 09 00 8E 06 B0 0A 26   .....}. .......&
 E30:  FF 06 74 89 8E 06 B0 0A  8B 46 FA 26 39 06 76 89   ..t..... .F.&9.v.
 E40:  7C 03 E9 07 00 8B 46 FA  26 A3 76 89 B8 1A 00 F7   |.....F. &.v.....
 E50:  6E 06 8B F0 C4 1E 08 0C  26 F6 80 CE 01 01 75 03   n....... &.....u.
 E60:  E9 4E 00 B8 1A 00 F7 6E  0A 8B F0 C4 1E 0C 0C 26   .N.....n .......&
 E70:  F6 80 CE 01 01 75 03 E9  37 00 B8 1A 00 F7 6E 06   .....u.. 7.....n.
 E80:  8B F0 C4 1E 08 0C 26 F6  80 CE 01 10 74 03 E9 17   ......&. ....t...
 E90:  00 B8 1A 00 F7 6E 0A 8B  F0 C4 1E 0C 0C 26 F6 80   .....n.. .....&..
 EA0:  CE 01 10 75 03 E9 09 00  8E 06 B0 0A 26 FF 06 78   ...u.... ....&..x
 EB0:  89 B8 1A 00 F7 6E 08 8B  F0 C4 1E 08 0C 26 F6 80   .....n.. .....&..
 EC0:  CE 01 01 75 03 E9 4E 00  B8 1A 00 F7 6E 0C 8B F0   ...u..N. ....n...
 ED0:  C4 1E 0C 0C 26 F6 80 CE  01 01 75 03 E9 37 00 B8   ....&... ..u..7..
 EE0:  1A 00 F7 6E 08 8B F0 C4  1E 08 0C 26 F6 80 CE 01   ...n.... ...&....
 EF0:  10 74 03 E9 17 00 B8 1A  00 F7 6E 0C 8B F0 C4 1E   .t...... ..n.....
 F00:  0C 0C 26 F6 80 CE 01 10  75 03 E9 09 00 8E 06 B0   ..&..... u.......
 F10:  0A 26 FF 06 78 89 81 7E  FE 96 00 7F 03 E9 09 00   .&..x... ........
 F20:  8E 06 B0 0A 26 FF 06 78  89 B8 1A 00 F7 6E 06 8B   ....&..x .....n..
 F30:  F0 C4 1E 08 0C 26 8A 80  CE 01 24 06 3C 04 73 03   .....&.. ..$.<.s.
 F40:  E9 09 00 8E 06 B0 0A 26  FF 06 78 89 B8 1A 00 F7   .......& ..x.....
 F50:  6E 08 8B F0 C4 1E 08 0C  26 8A 80 CE 01 24 06 3C   n....... &....$.<
 F60:  04 73 03 E9 09 00 8E 06  B0 0A 26 FF 06 78 89 B8   .s...... ..&..x..
 F70:  1A 00 F7 6E 06 8B F0 C4  1E 08 0C 26 F6 80 CE 01   ...n.... ...&....
 F80:  01 75 03 E9 5F 00 B8 1A  00 F7 6E 08 8B F0 C4 1E   .u.._... ..n.....
 F90:  08 0C 26 F6 80 CE 01 01  75 03 E9 48 00 B8 1A 00   ..&..... u..H....
 FA0:  F7 6E 0A 8B F0 C4 1E 0C  0C 26 F6 80 CE 01 01 75   .n...... .&.....u
 FB0:  03 E9 31 00 B8 1A 00 F7  6E 0C 8B F0 C4 1E 0C 0C   ..1..... n.......
 FC0:  26 F6 80 CE 01 01 75 03  E9 1A 00 83 7E FE 2D 7F   &.....u. ......-.
 FD0:  03 E9 11 00 8B 46 FE 8E  06 B0 0A 26 01 06 6E 89   .....F.. ...&..n.
 FE0:  26 FF 06 68 89 8B 46 FE  8E 06 B0 0A 26 01 06 6C   &..h..F. ....&..l
 FF0:  89 5E 5F 8B E5 5D CB 55  8B EC 81 EC 20 00 57 56   .^_..].U .... .WV
1000:  B8 1A 00 F7 6E 06 8B F0  C4 1E 08 0C 26 83 B8 BA   ....n... ....&...
1010:  01 FF 75 03 E9 06 00 B8  01 00 E9 03 00 B8 00 00   ..u..... ........
1020:  8B C8 B8 1A 00 F7 6E 06  8B F0 C4 1E 08 0C 89 4E   ......n. .......N
1030:  E2 26 83 B8 C6 01 FF 75  03 E9 06 00 B8 01 00 E9   .&.....u ........
1040:  03 00 B8 00 00 8B C8 B8  1A 00 F7 6E 06 8B F0 C4   ........ ...n....
1050:  1E 08 0C 89 4E E0 26 83  B8 C0 01 FF 75 03 E9 06   ....N.&. ....u...
1060:  00 B8 01 00 E9 03 00 B8  00 00 03 46 E0 03 46 E2   ........ ...F..F.
1070:  8B C8 B8 1A 00 F7 6E 06  8B F0 C4 1E 08 0C 26 8A   ......n. ......&.
1080:  80 CE 01 25 06 00 D0 E8  3B C8 74 03 E9 06 00 B8   ...%.... ;.t.....
1090:  00 00 E9 8B 03 B8 1A 00  F7 6E 08 8B F0 C4 1E 08   ........ .n......
```

```
10A0:  0C 26 83 B8 BA 01 FF 75  03 E9 06 00 B8 01 00 E9   .&.....u ........
10B0:  03 00 B8 00 00 8B C8 B8  1A 00 F7 6E 08 8B F0 C4   ........ ...n....
10C0:  1E 08 0C 89 4E E0 26 83  B8 C6 01 FF 75 03 E9 06   ....N.&. ....u...
10D0:  00 B8 01 00 E9 03 00 B8  00 00 8B C8 B8 1A 00 F7   ........ ........
10E0:  6E 08 8B F0 C4 1E 08 0C  89 4E E2 26 83 B8 C0 01   n....... .N.&....
10F0:  FF 75 03 E9 06 00 B8 01  00 E9 03 00 B8 00 00 03   .u...... ........
1100:  46 E2 03 46 E0 8B C8 B8  1A 00 F7 6E 08 8B F0 C4   F..F.... ...n....
1110:  1E 08 0C 26 8A 80 CE 01  25 06 00 D0 E8 3B C8 74   ...&.... %....;.t
1120:  03 E9 06 00 B8 00 00 E9  F6 02 B8 1A 00 F7 6E 06   ........ ......n.
1130:  8B F0 C4 1E 08 0C 26 8B  80 B6 01 89 46 EE B8 1A   ......&. ....F...
1140:  00 F7 6E 06 8B F0 C4 1E  08 0C 26 8B 80 B8 01 89   ..n..... ..&.....
1150:  46 F0 B8 1A 00 F7 6E 08  8B F0 C4 1E 08 0C 26 8B   F.....n. ......&.
1160:  80 B6 01 89 46 E6 B8 1A  00 F7 6E 08 8B F0 C4 1E   ....F... ..n.....
1170:  08 0C 26 8B 80 B8 01 89  46 E8 B8 1A 00 F7 6E 06   ..&..... F.....n.
1180:  8B F0 C4 1E 08 0C 8B 46  08 26 39 80 C0 01 74 03   .......F .&9...t.
1190:  E9 06 00 B8 01 00 E9 22  00 B8 1A 00 F7 6E 06 8B   ......." .....n..
11A0:  F0 C4 1E 08 0C 8B 46 08  26 39 80 BA 01 74 03 E9   ......F. &9...t..
11B0:  06 00 B8 00 00 E9 03 00  B8 02 00 89 46 FC B8 1A   ........ ....F...
11C0:  00 F7 6E 08 8B F0 C4 1E  08 0C 8B 46 06 26 39 80   ..n..... ...F.&9.
11D0:  C0 01 74 03 E9 06 00 B8  01 00 E9 22 00 B8 1A 00   ..t..... ..."....
11E0:  F7 6E 08 8B F0 C4 1E 08  0C 8B 46 06 26 39 80 BA   .n...... ..F.&9..
11F0:  01 74 03 E9 06 00 B8 00  00 E9 03 00 B8 02 00 89   .t...... ........
1200:  46 F8 B8 FF FF 89 46 FE  89 46 E4 C4 5E 12 26 C7   F.....F. .F..^.&.
1210:  07 B8 0B FF 76 14 FF 76  12 8D 46 EA 16 50 FF 76   ....v..v ..F..P.v
1220:  F8 FF 76 E8 FF 76 E6 FF  76 08 8D 4E F4 16 51 FF   ..v..v.. v..N..Q.
1230:  76 FC FF 76 F0 FF 76 EE  FF 76 06 9A 4A 15 11 00   v..v..v. .v..J...
1240:  83 C4 1C 89 46 E4 83 7E  E4 04 74 03 E9 18 00 8B   ....F..~ ..t.....
1250:  46 F4 C4 5E 0A 26 89 07  8B 46 EA C4 5E 0E 26 89   F..^.&.. .F..^.&.
1260:  07 B8 01 00 E9 B9 01 C4  5E 12 26 8B 07 89 46 EC   ........ ^.&...F.
1270:  FF 76 14 FF 76 12 8D 46  F6 16 50 FF 76 FC FF 76   .v..v..F ..P.v..v
1280:  F0 FF 76 EE FF 76 06 8D  4E F2 16 51 FF 76 F8 FF   ..v..v.. N..Q.v..
1290:  76 E8 FF 76 E6 FF 76 08  9A 4A 15 11 00 83 C4 1C   v..v..v. .J......
12A0:  89 46 FE 83 7E FE 04 74  03 E9 18 00 8B 46 F6 C4   .F..~..t .....F..
12B0:  5E 0A 26 89 07 8B 46 F2  C4 5E 0E 26 89 07 B8 01   ^.&...F. .^.&....
12C0:  00 E9 5C 01 8E 06 BC 0A  26 83 3E 76 01 00 75 03   ..\..... &.>v..u.
12D0:  E9 06 00 B8 00 00 E9 47  01 83 7E E4 01 74 03 E9   .......G ..~..t..
12E0:  38 01 83 7E FE 01 74 03  E9 2F 01 B8 1A 00 F7 6E   8..~..t. ./.....n
12F0:  F6 8B F0 C4 1E 0C 0C B8  1A 00 F7 6E EA 8B F8 8B   ........ ...n....
1300:  C3 8C C1 C4 1E 0C 0C 8C  C2 8E C1 8B CB 8B D8 26   ........ .......&
1310:  8B 80 B8 01 8E C2 8B D9  26 2B 81 B8 01 F7 D8 99   ........ &+......
1320:  52 50 52 50 9A FA 2A E5  0A 8B C8 B8 1A 00 8B DA   RPRP..*. ........
1330:  F7 6E F6 8B F0 8B C3 C4  1E 0C 0C 8B D0 B8 1A 00   .n...... ........
1340:  8B FA F7 6E EA 8B D6 8B  F0 8B C3 C4 1E 0C 0C 26   ...n.... .......&
1350:  8B 80 B6 01 8B F2 C4 1E  0C 0C 26 2B 80 B6 01 99   ........ ..&+....
1360:  52 50 52 50 8B F1 9A FA  2A E5 0A 03 F0 13 FA 57   RPRP.... *......W
1370:  56 9A 3A 01 42 08 83 C4  04 89 46 FA 83 7E FA 14   V.:.B... ..F..~..
1380:  7C 03 E9 95 00 B8 1A 00  F7 6E F4 8B F0 C4 1E 0C   |....... .n......
1390:  0C 26 8A 80 CE 01 04 02  8B C8 B8 1A 00 F7 6E F4   .&...... ......n.
13A0:  8B F0 C4 1E 0C 0C 26 32  88 CE 01 83 E1 06 B8 1A   ......&2 ........
13B0:  00 F7 6E F4 8B F0 C4 1E  0C 0C 26 31 88 CE 01 B8   ..n..... ..&1....
13C0:  1A 00 F7 6E EA 8B F0 C4  1E 0C 0C 26 8A 80 CE 01   ...n.... ...&....
13D0:  04 02 8B C8 B8 1A 00 F7  6E EA 8B F0 C4 1E 0C 0C   ........ n.......
13E0:  26 32 88 CE 01 83 E1 06  B8 1A 00 F7 6E EA 8B F0   &2...... ....n...
13F0:  C4 1E 0C 0C 26 31 88 CE  01 8B 46 F6 C4 5E 0A 26   ....&1.. ..F..^.&
```

```
1400:  89 07 8B 46 F2 C4 5E 0E  26 89 07 8B 46 EC C4 5E   ...F..^. &...F..^
1410:  12 26 01 07 B8 01 00 E9  06 00 B8 00 00 E9 00 00   .&...... ........
1420:  5E 5F 8B E5 5D CB 55 8B  EC 81 EC 0C 00 57 56 B8   ^_..].U. .....WV.
1430:  1A 00 F7 6E 12 8B F0 C4  5E 0E 26 8B 40 10 8B C8   ...n.... ^.&.@...
1440:  B8 1A 00 F7 6E 12 8B F0  C4 5E 0E 26 39 48 04 75   ....n... .^.&9H.u
1450:  03 E9 4A 00 B8 1A 00 F7  6E 12 8B F0 C4 5E 0E 26   ..J..... n....^.&
1460:  8B 40 0A 8B C8 B8 1A 00  F7 6E 12 8B F0 C4 5E 0E   .@...... .n....^.
1470:  26 39 48 04 75 03 E9 25  00 B8 1A 00 F7 6E 12 8B   &9H.u..% .....n..
1480:  F0 C4 5E 0E 26 8B 40 10  8B C8 B8 1A 00 F7 6E 12   ..^.&.@. ......n.
1490:  8B F0 C4 5E 0E 26 39 48  0A 74 03 E9 06 00 B8 00   ...^.&9H .t......
14A0:  00 E9 B0 03 C7 46 F4 00  00 E9 03 00 FF 46 F4 83   .....F.. .....F..
14B0:  7E F4 03 7C 03 E9 29 00  B8 1A 00 F7 6E 12 8B 76   ~..|..). ....n..v
14C0:  F4 8B CE D1 E6 03 F1 D1  E6 03 F0 C4 5E 0E 26 83   ........ ....^.&.
14D0:  78 04 FF 74 03 E9 06 00  B8 00 00 E9 76 03 E9 CB   x..t.... ....v...
14E0:  FF B8 1A 00 F7 6E 12 8B  F0 C4 5E 0E 26 83 60 18   .....n.. ..^.&.`.
14F0:  F7 C7 46 FE 01 00 B8 1A  00 F7 6E 12 8B F0 C4 5E   ..F..... ..n....^
1500:  0E 8B 46 14 26 39 40 04  74 03 E9 0A 00 C7 46 FE   ..F.&9@. t.....F.
1510:  00 00 C7 46 F8 02 00 B8  1A 00 F7 6E 12 8B F0 C4   ...F.... ...n....
1520:  5E 0E 8B 46 14 26 39 40  10 74 03 E9 0A 00 C7 46   ^..F.&9@ .t.....F
1530:  FE 02 00 C7 46 F8 00 00  83 7E FE 00 75 03 E9 09   ....F... .~..u...
1540:  00 83 7E FE 02 74 03 E9  D0 01 C7 46 FA 00 00 C4   ..~..t.. ...F....
1550:  5E 06 8B 46 FA 26 39 07  7F 03 E9 17 00 8B 5E FA   ^..F.&9. ......^.
1560:  D1 E3 C4 76 0A 26 83 38  FF 75 03 E9 06 00 FF 46   ...v.&.8 .u.....F
1570:  FA E9 DB FF 8B 5E FA D1  E3 C4 76 0A 8B 46 12 26   .....^.. ..v..F.&
1580:  89 00 C4 5E 06 26 FF 07  B8 1A 00 F7 6E 12 8B F0   ...^.&.. ....n...
1590:  C4 5E 0E 26 8B 40 0A 89  46 F6 B8 1A 00 F7 6E F6   .^.&.@.. F.....n.
15A0:  8B F0 C4 5E 0E 8B 46 12  26 39 40 04 74 03 E9 59   ...^..F. &9@.t..Y
15B0:  00 B8 1A 00 F7 6E 12 8B  76 F8 8B CE D1 E6 03 F1   .....n.. v.......
15C0:  D1 E6 03 F0 C4 5E 0E 26  8B 40 04 8B C8 B8 1A 00   .....^.& .@......
15D0:  F7 6E F6 8B F0 C4 5E 0E  26 89 48 04 B8 1A 00 F7   .n....^. &.H.....
15E0:  6E 12 8B 76 F8 8B CE D1  E6 03 F1 D1 E6 03 F0 C4   n..v.... ........
15F0:  5E 0E 26 8B 40 08 8B C8  B8 1A 00 F7 6E F6 8B F0   ^.&.@... ....n...
1600:  C4 5E 0E 26 01 48 08 E9  56 00 B8 1A 00 F7 6E 12   .^.&.H.. V.....n.
1610:  8B 76 F8 8B CE D1 E6 03  F1 D1 E6 03 F0 C4 5E 0E   .v...... ......^.
1620:  26 8B 40 04 8B C8 B8 1A  00 F7 6E F6 8B F0 C4 5E   &.@..... ..n....^
1630:  0E 26 89 48 10 B8 1A 00  F7 6E 12 8B 76 F8 8B CE   .&.H.... .n..v...
1640:  D1 E6 03 F1 D1 E6 03 F0  C4 5E 0E 26 8B 40 08 8B   ........ .^.&.@..
1650:  C8 B8 1A 00 F7 6E F6 8B  F0 C4 5E 0E 26 01 48 14   .....n.. ..^.&.H.
1660:  B8 1A 00 F7 6E 12 8B 76  F8 8B CE D1 E6 03 F1 D1   ....n..v ........
1670:  E6 03 F0 C4 5E 0E B8 1A  00 26 F7 68 04 8B F0 C4   ....^... .&.h....
1680:  5E 0E 8B 46 F6 26 89 40  0A B8 1A 00 F7 6E 12 8B   ^..F.&.@ .....n..
1690:  F0 C4 5E 0E 26 8B 40 0E  8B C8 B8 1A 00 F7 6E 12   ..^.&.@. ......n.
16A0:  8B 76 F8 8B D6 D1 E6 03  F2 D1 E6 03 F0 C4 5E 0E   .v...... ......^.
16B0:  B8 1A 00 26 F7 68 04 8B  F0 C4 5E 0E 26 01 48 0E   ...&.h.. ..^.&.H.
16C0:  83 7E FE 02 74 03 E9 2C  00 B8 1A 00 F7 6E 12 03   .~..t.., .....n..
16D0:  46 0E 8B 56 10 05 10 00  8B C8 B8 1A 00 8B DA F7   F..V.... ........
16E0:  6E 12 8B F0 8B C3 C4 5E  0E 1E 8D 78 04 8B F1 8E   n......^ ...x....
16F0:  D8 A5 A5 A5 1F B8 1A 00  F7 6E 12 8B F0 C4 5E 0E   ........ .n....^.
1700:  26 C7 40 10 FF FF B8 1A  00 F7 6E 12 8B F0 C4 5E   &.@..... ..n....^
1710:  0E 26 C7 40 0A FF FF E9  3A 01 B8 1A 00 F7 6E 12   .&.@.... :.....n.
1720:  8B F0 C4 5E 0E 26 8B 40  10 8B C8 B8 1A 00 F7 6E   ...^.&.@ .......n
1730:  12 8B F0 C4 5E 0E B8 1A  00 26 F7 68 04 8B F0 C4   ....^... .&.h....
1740:  5E 0E 26 89 48 0A B8 1A  00 F7 6E 12 8B F0 C4 5E   ^.&.H... ..n....^
1750:  0E 26 8B 40 14 8B C8 B8  1A 00 F7 6E 12 8B F0 C4   .&.@.... ...n....
```

```
1760:  5E 0E B8 1A 00 26 F7 68  04 8B F0 C4 5E 0E 26 01   ^....&.h ....^.&.
1770:  48 0E B8 1A 00 F7 6E 12  8B F0 C4 5E 0E 26 8B 40   H.....n. ...^.&.@
1780:  04 8B C8 B8 1A 00 F7 6E  12 8B F0 C4 5E 0E B8 1A   .......n ....^...
1790:  00 26 F7 68 10 8B F0 C4  5E 0E 26 89 48 0A B8 1A   .&.h.... ^.&.H...
17A0:  00 F7 6E 12 8B F0 C4 5E  0E 26 8B 40 08 8B C8 B8   ..n....^ .&.@....
17B0:  1A 00 F7 6E 12 8B F0 C4  5E 0E B8 1A 00 26 F7 68   ...n.... ^....&.h
17C0:  10 8B F0 C4 5E 0E 26 01  48 0E B8 F4 FF 50 B8 1A   ....^.&. H....P..
17D0:  00 F7 6E 12 8B F0 C4 5E  0E 26 FF 70 10 FF 76 10   ..n....^ .&.p..v.
17E0:  FF 76 0E 9A 13 06 73 08  83 C4 08 89 46 FC C7 46   .v....s. ....F..F
17F0:  FA 00 00 C4 5E 06 8B 46  FA 26 39 07 7F 03 E9 17   ....^..F .&9.....
1800:  00 8B 5E FA D1 E3 C4 76  0A 26 83 38 FF 75 03 E9   ..^....v .&.8.u..
1810:  06 00 FF 46 FA E9 DB FF  8B 5E FA D1 E3 C4 76 0A   ...F.... .^....v.
1820:  8B 46 FC 26 89 00 C4 5E  06 26 FF 07 B8 1A 00 F7   .F.&...^ .&......
1830:  6E 12 8B F0 C4 5E 0E 26  C7 40 10 FF FF B8 1A 00   n....^.& .@......
1840:  F7 6E 12 8B F0 C4 5E 0E  26 C7 40 04 FF FF B8 01   .n....^. &.@.....
1850:  00 E9 00 00 5E 5F 8B E5  5D CB 55 8B EC 81 EC 6E   ....^_.. ].U....n
1860:  00 57 56 B8 30 75 89 46  EE 89 46 F6 C4 5E 1E 26   .WV.0u.F ..F..^.&
1870:  89 07 C7 46 C0 0A 00 B8  00 00 89 46 A8 89 46 CE   ...F.... ...F..F.
1880:  8D 46 AA 16 50 8D 46 B6  16 50 9A B5 05 20 0A 83   .F..P.F. .P... ..
1890:  C4 08 B8 1A 00 F7 6E 06  8B F0 C4 1E 08 0C 26 F6   ......n. ......&.
18A0:  80 CE 01 08 75 03 E9 20  00 8D 46 98 16 50 B8 1A   ....u..  ..F..P..
18B0:  00 F7 6E 06 03 06 08 0C  8B 16 0A 0C 05 BA 01 52   ..n..... .......R
18C0:  50 9A 00 00 C3 03 83 C4  08 B8 1A 00 F7 6E 12 8B   P....... .....n..
18D0:  F0 C4 1E 08 0C 26 F6 80  CE 01 08 75 03 E9 20 00   .....&.. ...u.. .
18E0:  8D 46 FA 16 50 B8 1A 00  F7 6E 12 03 06 08 0C 8B   .F..P... .n......
18F0:  16 0A 0C 05 BA 01 52 50  9A 00 00 C3 03 83 C4 08   ......RP ........
1900:  B8 1A 00 F7 6E 06 8B 76  0C 8B CE D1 E6 03 F1 D1   ....n..v ........
1910:  E6 03 F0 C4 1E 08 0C 26  8B 80 BE 01 89 46 CA C4   .......& .....F..
1920:  1E 0C 0C 26 8B 47 02 48  50 8B 46 08 2D 14 00 50   ...&.G.H P.F.-..P
1930:  A1 0C 0C 8B 16 0E 0C 05  F6 52 52 50 9A CC 01 C3   ........ .RRP....
1940:  03 83 C4 08 89 46 D8 8B  46 D8 89 46 C4 E9 03 00   .....F.. F..F....
1950:  FF 46 C4 C4 1E 0C 0C 8B  46 C4 26 39 47 02 7F 03   .F...... F.&9G...
1960:  E9 1D 07 8B 76 C4 8B C6  D1 E6 03 F0 D1 E6 C4 1E   ....v... ........
1970:  0C 0C 26 8B 80 F6 52 2B  46 08 89 46 EC 83 7E EC   ..&...R+ F..F..~.
1980:  2D 7F 03 E9 03 00 E9 F7  06 8B 76 C4 8B C6 D1 E6   -....... ..v.....
1990:  03 F0 D1 E6 C4 1E 0C 0C  26 8B 80 F8 52 2B 46 0A   ........ &...R+F.
19A0:  89 46 E0 83 7E E0 2D 7F  03 E9 03 00 E9 A1 FF 83   .F..~.-. ........
19B0:  7E E0 D3 7C 03 E9 03 00  E9 95 FF 8B 76 C4 8B C6   ~..|.... ....v...
19C0:  D1 E6 03 F0 D1 E6 C4 1E  0C 0C 26 8B 80 FA 52 89   ........ ..&...R.
19D0:  46 C6 B8 1A 00 F7 6E C6  8B F0 C4 1E 0C 0C 26 F6   F.....n. ......&.
19E0:  80 CE 01 08 74 03 E9 20  00 B8 1A 00 F7 6E C6 8B   ....t..  .....n..
19F0:  F0 C4 1E 0C 0C 26 8A 80  CE 01 24 06 3C 02 73 03   .....&.. ..$.<.s.
1A00:  E9 03 00 E9 4A FF E9 71  00 B8 1A 00 F7 6E C6 8B   ....J..q .....n..
1A10:  F0 C4 1E 0C 0C 26 8A 80  CE 01 24 06 3C 06 74 03   .....&.. ..$.<.t.
1A20:  E9 03 00 E9 2A FF B8 1A  00 F7 6E 06 8B F0 C4 1E   ....*... ..n.....
1A30:  08 0C 26 F6 80 CE 01 08  75 03 E9 3D 00 8D 46 F0   ..&..... u..=..F.
1A40:  16 50 B8 1A 00 F7 6E C6  03 06 0C 0C 8B 16 0E 0C   .P....n. ........
1A50:  05 BA 01 52 50 9A 00 00  C3 03 83 C4 08 8D 46 98   ...RP... ......F.
1A60:  16 50 8D 46 F0 16 50 9A  31 01 C3 03 83 C4 08 3D   .P.F..P. 1......=
1A70:  00 00 74 03 E9 03 00 E9  D6 FE C7 46 BC 00 00 E9   ..t..... ...F....
1A80:  03 00 FF 46 BC 83 7E BC  03 7C 03 E9 EF 05 C7 46   ...F..~. .|.....F
1A90:  D6 00 00 B8 1A 00 F7 6E  C6 8B 76 BC 8B CE D1 E6   .......n ..v.....
1AA0:  03 F1 D1 E6 03 F0 C4 1E  0C 0C 26 8B 80 BA 01 89   ........ ..&.....
1AB0:  46 BE 83 7E BE FF 74 03  E9 03 00 E9 C4 FF B8 1A   F..~..t. ........
```

```
1AC0: 00 F7 6E BE 8B F0 C4 1E  0C 0C 26 F6 80 CE 01 08   ..n..... ..&.....
1AD0: 75 03 E9 17 00 B8 1A 00  F7 6E 12 8B F0 C4 1E 08   u....... .n......
1AE0: 0C 26 F6 80 CE 01 08 75  03 E9 8A 00 B8 1A 00 F7   .&.....u ........
1AF0: 6E 12 8B F0 C4 1E 08 0C  26 F6 80 CE 01 08 75 03   n....... &.....u.
1B00: E9 17 00 B8 1A 00 F7 6E  BE 8B F0 C4 1E 0C 0C 26   .......n .......&
1B10: F6 80 CE 01 08 75 03 E9  5C 00 B8 1A 00 F7 6E C6   .....u.. \.....n.
1B20: 8B F0 C4 1E 0C 0C 26 F6  80 CE 01 08 75 03 E9 17   ......&. ....u...
1B30: 00 B8 1A 00 F7 6E 06 8B  F0 C4 1E 08 0C 26 F6 80   .....n.. .....&..
1B40: CE 01 08 75 03 E9 2E 00  B8 1A 00 F7 6E 06 8B F0   ...u.... ....n...
1B50: C4 1E 08 0C 26 F6 80 CE  01 08 75 03 E9 1A 00 B8   ....&... ..u.....
1B60: 1A 00 F7 6E C6 8B F0 C4  1E 0C 0C 26 F6 80 CE 01   ...n.... ...&....
1B70: 08 74 03 E9 03 00 FF 46  D6 B8 1A 00 F7 6E BE 8B   .t.....F .....n..
1B80: F0 C4 1E 0C 0C 26 F6 80  CE 01 08 74 03 E9 20 00   .....&.. ...t.. .
1B90: B8 1A 00 F7 6E BE 8B F0  C4 1E 0C 0C 26 8A 80 CE   ....n... ....&...
1BA0: 01 24 06 3C 02 74 03 E9  03 00 E9 D5 FE E9 71 00   .$.<.t.. ......q.
1BB0: B8 1A 00 F7 6E BE 8B F0  C4 1E 0C 0C 26 8A 80 CE   ....n... ....&...
1BC0: 01 24 06 3C 06 74 03 E9  03 00 E9 B5 FE B8 1A 00   .$.<.t.. ........
1BD0: F7 6E 12 8B F0 C4 1E 08  0C 26 F6 80 CE 01 08 75   .n...... .&.....u
1BE0: 03 E9 3D 00 8D 46 E6 16  50 B8 1A 00 F7 6E BE 03   ..=..F.. P....n..
1BF0: 06 0C 0C 8B 16 0E 0C 05  BA 01 52 50 9A 00 00 C3   ........ ..RP....
1C00: 03 83 C4 08 8D 46 FA 16  50 8D 46 E6 16 50 9A 31   .....F.. P.F..P.1
1C10: 01 C3 03 83 C4 08 3D 00  00 74 03 E9 03 00 E9 61   ......=. .t.....a
1C20: FE B8 1A 00 F7 6E C6 8B  F0 C4 1E 0C 0C 26 8B 80   .....n.. .....&..
1C30: B6 01 89 46 B0 B8 1A 00  F7 6E C6 8B F0 C4 1E 0C   ...F.... .n......
1C40: 0C 26 8B 80 B8 01 89 46  B2 B8 1A 00 F7 6E BE 8B   .&.....F .....n..
1C50: F0 C4 1E 0C 0C 26 8B 80  B6 01 89 46 A4 B8 1A 00   .....&.. ...F....
1C60: F7 6E BE 8B F0 C4 1E 0C  0C 26 8B 80 B8 01 89 46   .n...... .&.....F
1C70: A6 B8 1A 00 F7 6E BE 8B  F0 C4 1E 0C 0C 8B 46 C6   .....n.. ......F.
1C80: 26 39 80 C0 01 74 03 E9  06 00 B8 01 00 E9 22 00   &9...t.. ......".
1C90: B8 1A 00 F7 6E BE 8B F0  C4 1E 0C 0C 8B 46 C6 26   ....n... .....F.&
1CA0: 39 80 BA 01 74 03 E9 06  00 B8 00 00 E9 03 00 B8   9...t... ........
1CB0: 02 00 89 46 C8 B8 1A 00  F7 6E BE 8B 76 C8 8B CE   ...F.... .n..v...
1CC0: D1 E6 03 F1 D1 E6 03 F0  C4 1E 0C 0C 26 8B 80 BE   ........ ....&...
1CD0: 01 89 46 AE B8 1A 00 F7  6E 06 8B 76 0C 8B CE D1   ..F..... n..v....
1CE0: E6 03 F1 D1 E6 03 F0 C4  1E 08 0C 26 8B 80 BC 01   ........ ...&....
1CF0: 89 46 C2 B8 1A 00 F7 6E  12 8B 76 18 8B CE D1 E6   .F.....n ..v.....
1D00: 03 F1 D1 E6 03 F0 C4 1E  08 0C 26 8B 80 BC 01 89   ........ ..&.....
1D10: 46 BA B8 1A 00 F7 6E C6  8B 76 BC 8B CE D1 E6 03   F.....n. .v......
1D20: F1 D1 E6 03 F0 C4 1E 0C  0C 26 8B 80 BC 01 89 46   ........ .&.....F
1D30: A2 B8 1A 00 F7 6E BE 8B  76 C8 8B CE D1 E6 03 F1   .....n.. v.......
1D40: D1 E6 03 F0 C4 1E 0C 0C  26 8B 80 BC 01 89 46 9E   ........ &.....F.
1D50: 8B 46 A4 2B 46 14 89 46  E2 8B 46 A6 2B 46 16 89   .F.+F..F ..F.+F..
1D60: 46 DA C7 46 B4 01 00 FF  76 E2 9A EA 29 E5 0A 83   F..F.... v...)...
1D70: C4 02 3D 2D 00 7E 03 E9  13 00 FF 76 DA 9A EA 29   ..=-.~.. ...v...)
1D80: E5 0A 83 C4 02 3D 2D 00  7F 03 E9 05 00 C7 46 B4   .....=-. ......F.
1D90: 00 00 8B 46 A2 2B 46 C2  89 46 B8 81 7E B8 B4 00   ...F.+F. .F..~...
1DA0: 7F 03 E9 09 00 8B 46 B8  2D 68 01 E9 16 00 81 7E   ......F. -h.....~
1DB0: B8 4C FF 7D 03 E9 06 00  8B 46 B8 E9 06 00 8B 46   .L.}.... .F.....F
1DC0: B8 05 68 01 50 9A EA 29  E5 0A 83 C4 02 89 46 B8   ..h.P..) ......F.
1DD0: 83 7E B8 12 7F 03 E9 03  00 E9 A6 FC 8B 46 AE 2B   .~...... .....F.+
1DE0: 46 CA 50 9A EA 29 E5 0A  83 C4 02 89 46 DC 83 7E   F.P..).. ....F..~
1DF0: DC 2D 7F 03 E9 05 00 C7  46 B4 00 00 8B 46 9E 2B   .-...... F....F.+
1E00: 46 BA 89 46 AC 81 7E AC  B4 00 7F 03 E9 09 00 8B   F..F..~. ........
1E10: 46 AC 2D 68 01 E9 16 00  81 7E AC 4C FF 7D 03 E9   F.-h.... .~.L.}..
```

```
MATCH.DMP            Thursday, January  6, 1994  12:04pm              Page 10

1E20:  06 00 8B 46 AC E9 06 00  8B 46 AC 05 68 01 50 9A   ...F.... .F..h.P.
1E30:  EA 29 E5 0A 83 C4 02 89  46 AC 83 7E AC 12 7F 03   .)...... F.......
1E40:  E9 05 00 C7 46 B4 00 00  8B 46 B0 2B 46 08 99 52   ....F... .F.+F..R
1E50:  50 52 50 9A FA 2A E5 0A  8B C8 8B 46 B2 2B 46 0A   PRP..*.. ...F.+F.
1E60:  8B DA 99 52 50 52 50 8B  F1 8B FB 9A FA 2A E5 0A   ...RPRP. .....*..
1E70:  03 F0 13 FA 57 56 9A 3A  01 42 08 83 C4 04 89 46   ....WV.: .B.....F
1E80:  A0 8B 46 A4 2B 46 14 99  52 50 52 50 9A FA 2A E5   ..F.+F.. RPRP..*.
1E90:  0A 8B C8 8B 46 A6 2B 46  16 8B DA 99 52 50 52 50   ....F.+F ....RPRP
1EA0:  8B F1 8B FB 9A FA 2A E5  0A 03 F0 13 FA 57 56 9A   ......*. .....WV.
1EB0:  3A 01 42 08 83 C4 04 89  46 94 FF 76 16 FF 76 14   :.B..... F..v..v.
1EC0:  FF 76 0A FF 76 08 FF 76  A6 FF 76 A4 FF 76 B2 FF   .v..v..v ..v..v..
1ED0:  76 B0 9A 8A 01 73 08 83  C4 10 89 46 D2 B8 1A 00   v....s.. ...F....
1EE0:  F7 6E C6 8B F0 C4 1E 0C  0C 26 F6 80 CE 01 01 75   .n...... .&.....u
1EF0:  03 E9 5E 00 B8 1A 00 F7  6E BE 8B F0 C4 1E 0C 0C   ..^..... n.......
1F00:  26 F6 80 CE 01 01 75 03  E9 47 00 B8 1A 00 F7 6E   &.....u. .G.....n
1F10:  06 8B F0 C4 1E 08 0C 26  F6 80 CE 01 01 75 03 E9   .......& .....u..
1F20:  30 00 B8 1A 00 F7 6E 12  8B F0 C4 1E 08 0C 26 F6   0.....n. ......&.
1F30:  80 CE 01 01 75 03 E9 19  00 B8 14 00 F7 6E CA B9   ....u... .....n..
1F40:  64 00 99 F7 F9 3B 46 DC  7C 03 E9 05 00 C7 46 B4   d....;F. |.....F.
1F50:  00 00 FF 76 D2 9A EA 29  E5 0A 83 C4 02 3D 12 00   ...v...) .....=..
1F60:  7F 03 E9 05 00 C7 46 B4  00 00 B8 1A 00 F7 6E 06   ......F. ......n.
1F70:  8B F0 C4 1E 08 0C 26 F6  80 CE 01 01 75 03 E9 26   ......&. ....u..&
1F80:  00 B8 1A 00 F7 6E C6 8B  F0 C4 1E 0C 0C 26 F6 80   .....n.. .....&..
1F90:  CE 01 01 75 03 E9 0F 00  83 7E A0 14 7F 03 E9 03   ...u.... ........
1FA0:  00 E9 DE FA E9 0C 00 83  7E A0 2D 7F 03 E9 03 00   ........ ..-.....
1FB0:  E9 CF FA B8 1A 00 F7 6E  12 8B F0 C4 1E 08 0C 26   .......n .......&
1FC0:  F6 80 CE 01 01 75 03 E9  28 00 B8 1A 00 F7 6E BE   .....u.. (.....n.
1FD0:  8B F0 C4 1E 0C 0C 26 F6  80 CE 01 01 75 03 E9 11   ......&. ....u...
1FE0:  00 83 7E 94 14 7F 03 E9  05 00 C7 46 B4 00 00 E9   ........ ...F....
1FF0:  0E 00 83 7E 94 2D 7F 03  E9 05 00 C7 46 B4 00 00   .....-.. ....F...
2000:  8B 46 B8 03 46 A0 89 46  E4 8B 46 AC 03 46 94 03   .F..F..F ..F..F..
2010:  46 DC 89 46 DE 8B 46 D2  03 46 DE 03 46 E4 89 46   F..F..F. .F..F..F
2020:  D0 83 7E B4 00 75 03 E9  2E 00 C4 5E 1E 8B 46 D0   .....u.. ...^..F.
2030:  26 39 07 7F 03 E9 20 00  8B 46 D6 89 46 C0 8B 46   &9...... .F..F..F
2040:  D0 C4 5E 1E 26 89 07 8B  46 C6 89 46 96 8B 46 BE   ..^.&... F..F..F.
2050:  89 46 F8 C7 46 A8 01 00  8B 46 F6 39 46 E4 7C 03   .F..F... .F.9F.|.
2060:  E9 17 00 8B 46 E4 89 46  F6 8B 46 C6 89 46 D4 8B   ....F..F ..F..F..
2070:  46 BE 89 46 CC C7 46 CE  01 00 E9 05 FA E9 D0 F8   F..F..F. ........
2080:  83 7E A8 00 75 03 E9 81  00 B8 1A 00 F7 6E 96 8B   ....u... .....n..
2090:  F0 C4 1E 0C 0C 26 F6 80  CE 01 01 75 03 E9 59 00   .....&.. ...u..Y.
20A0:  B8 1A 00 F7 6E F8 8B F0  C4 1E 0C 0C 26 F6 80 CE   ....n... ....&...
20B0:  01 01 75 03 E9 42 00 B8  1A 00 F7 6E 06 8B F0 C4   ..u..B.. ...n....
20C0:  1E 08 0C 26 F6 80 CE 01  01 75 03 E9 2B 00 B8 1A   ...&.... .u..+...
20D0:  00 F7 6E 12 8B F0 C4 1E  08 0C 26 F6 80 CE 01 01   ..n..... ..&.....
20E0:  75 03 E9 14 00 C4 5E 1E  26 83 3F 50 7F 03 E9 05   u.....^. &.?P....
20F0:  00 C7 46 A8 00 00 E9 11  00 C4 5E 1E 26 83 3F 73   ..F..... ..^.&.?s
2100:  7F 03 E9 05 00 C7 46 A8  00 00 83 7E A8 00 75 03   ......F. ......u.
2110:  E9 18 00 8B 46 96 C4 5E  0E 26 89 07 8B 46 F8 C4   ....F..^ .&...F..
2120:  5E 1A 26 89 07 B8 04 00  E9 67 00 83 7E CE 00 75   ^.&..... .g.....u
2130:  03 E9 58 00 B8 1A 00 F7  6E D4 8B F0 C4 1E 0C 0C   ..X..... n.......
2140:  26 F6 80 CE 01 01 75 03  E9 41 00 B8 1A 00 F7 6E   &.....u. .A.....n
2150:  06 8B F0 C4 1E 08 0C 26  F6 80 CE 01 01 75 03 E9   .......& .....u..
2160:  2A 00 83 7E F6 1E 7E 03  E9 21 00 8B 46 D4 C4 5E   *....... .!..F..^
2170:  0E 26 89 07 8B 46 CC C4  5E 1A 26 89 07 8B 46 F6   .&...F.. ^.&...F.
```

```
2180: C4 5E 1E 26 89 07 B8 01  00 E9 06 00 B8 FF FF E9   .^.&.... ........
2190: 00 00 5E 5F 8B E5 5D CB  55 8B EC 81 EC 22 00 57   ..^_..]. U....".W
21A0: 56 8E 06 BE 0A 26 83 3E  82 01 00 75 03 E9 43 00   V....&.> ...u..C.
21B0: 8E 06 B0 0A 26 83 3E 82  89 00 74 03 E9 34 00 B8   ....&.>. ..t..4..
21C0: 1A 00 F7 6E 06 8B F0 C4  1E 08 0C 26 F6 80 CE 01   ...n.... ...&....
21D0: 80 75 03 E9 17 00 B8 1A  00 F7 6E 08 8B F0 C4 1E   .u...... ..n.....
21E0: 08 0C 26 F6 80 CE 01 80  74 03 E9 06 00 B8 00 00   ..&..... t.......
21F0: E9 6A 05 B8 1A 00 F7 6E  06 8B F0 C4 1E 08 0C 26   .j.....n .......&
2200: 83 B8 BA 01 FF 75 03 E9  06 00 B8 01 00 E9 03 00   .....u.. ........
2210: B8 00 00 8B C8 B8 1A 00  F7 6E 06 8B F0 C4 1E 08   ........ .n......
2220: 0C 89 4E E0 26 83 B8 C6  01 FF 75 03 E9 06 00 B8   ..N.&... ..u.....
2230: 01 00 E9 03 00 B8 00 00  8B C8 B8 1A 00 F7 6E 06   ........ ......n.
2240: 8B F0 C4 1E 08 0C 89 4E  DE 26 83 B8 C0 01 FF 75   .......N .&.....u
2250: 03 E9 06 00 B8 01 00 E9  03 00 B8 00 00 03 46 DE   ........ ......F.
2260: 03 46 E0 8B C8 B8 1A 00  F7 6E 06 8B F0 C4 1E 08   .F...... .n......
2270: 0C 26 8A 80 CE 01 25 06  00 D0 E8 3B C8 74 03 E9   .&....%. ...;.t..
2280: 06 00 B8 00 00 E9 D5 04  B8 1A 00 F7 6E 08 8B F0   ........ ....n...
2290: C4 1E 08 0C 26 83 B8 C6  01 FF 75 03 E9 06 00 B8   ....&... ..u.....
22A0: 01 00 E9 03 00 B8 00 00  8B C8 B8 1A 00 F7 6E 08   ........ ......n.
22B0: 8B F0 C4 1E 08 0C 89 4E  DE 26 83 B8 BA 01 FF 75   .......N .&.....u
22C0: 03 E9 06 00 B8 01 00 E9  03 00 B8 00 00 8B C8 B8   ........ ........
22D0: 1A 00 F7 6E 08 8B F0 C4  1E 08 0C 89 4E E0 26 83   ...n.... ....N.&.
22E0: B8 C0 01 FF 75 03 E9 06  00 B8 01 00 E9 03 00 B8   ....u... ........
22F0: 00 00 03 46 E0 03 46 DE  8B C8 B8 1A 00 F7 6E 08   ...F..F. ......n.
2300: 8B F0 C4 1E 08 0C 26 8A  80 CE 01 25 06 00 D0 E8   ......&. ...%....
2310: 3B C8 74 03 E9 06 00 B8  00 00 E9 40 04 B8 1A 00   ;.t..... ...@....
2320: F7 6E 0A 8B F0 C4 1E 0C  0C 26 83 B8 BA 01 FF 75   .n...... .&.....u
2330: 03 E9 06 00 B8 01 00 E9  03 00 B8 00 00 8B C8 B8   ........ ........
2340: 1A 00 F7 6E 0A 8B F0 C4  1E 0C 0C 89 4E DE 26 83   ...n.... ....N.&.
2350: B8 C6 01 FF 75 03 E9 06  00 B8 01 00 E9 03 00 B8   ....u... ........
2360: 00 00 8B C8 B8 1A 00 F7  6E 0A 8B F0 C4 1E 0C 0C   ........ n.......
2370: 89 4E E0 26 83 B8 C0 01  FF 75 03 E9 06 00 B8 01   .N.&.... .u......
2380: 00 E9 03 00 B8 00 00 03  46 E0 03 46 DE 8B C8 B8   ........ F..F....
2390: 1A 00 F7 6E 0A 8B F0 C4  1E 0C 0C 26 8A 80 CE 01   ...n.... ...&....
23A0: 25 06 00 D0 E8 3B C8 74  03 E9 06 00 B8 00 00 E9   %....;.t ........
23B0: AB 03 B8 1A 00 F7 6E 0C  8B F0 C4 1E 0C 0C 26 83   ......n. ......&.
23C0: B8 C6 01 FF 75 03 E9 06  00 B8 01 00 E9 03 00 B8   ....u... ........
23D0: 00 00 8B C8 B8 1A 00 F7  6E 0C 8B F0 C4 1E 0C 0C   ........ n.......
23E0: 89 4E DE 26 83 B8 BA 01  FF 75 03 E9 06 00 B8 01   .N.&.... .u......
23F0: 00 E9 03 00 B8 00 00 8B  C8 B8 1A 00 F7 6E 0C 8B   ........ .....n..
2400: F0 C4 1E 0C 0C 89 4E E0  26 83 B8 C0 01 FF 75 03   ......N. &.....u.
2410: E9 06 00 B8 01 00 E9 03  00 B8 00 00 03 46 E0 03   ........ .....F..
2420: 46 DE 8B C8 B8 1A 00 F7  6E 0C 8B F0 C4 1E 0C 0C   F....... n.......
2430: 26 8A 80 CE 01 25 06 00  D0 E8 3B C8 74 03 E9 06   &....%.. ..;.t...
2440: 00 B8 00 00 E9 16 03 B8  1A 00 F7 6E 06 8B F0 C4   ........ ...n....
2450: 1E 08 0C 8B 46 08 26 39  80 C0 01 74 03 E9 06 00   ....F.&9 ...t....
2460: B8 01 00 E9 22 00 B8 1A  00 F7 6E 06 8B F0 C4 1E   ...."... ..n.....
2470: 08 0C 8B 46 08 26 39 80  BA 01 74 03 E9 06 00 B8   ...F.&9. ..t.....
2480: 00 00 E9 03 00 B8 02 00  89 46 FA B8 1A 00 F7 6E   ........ .F.....n
2490: 0A 8B F0 C4 1E 0C 0C 8B  46 0C 26 39 80 C0 01 74   ........ F.&9...t
24A0: 03 E9 06 00 B8 01 00 E9  22 00 B8 1A 00 F7 6E 0A   ........ ".....n.
24B0: 8B F0 C4 1E 0C 0C 8B 46  0C 26 39 80 BA 01 74 03   .......F .&9...t.
24C0: E9 06 00 B8 00 00 E9 03  00 B8 02 00 89 46 F4 B8   ........ .....F..
24D0: 1A 00 F7 6E 08 8B F0 C4  1E 08 0C 8B 46 06 26 39   ...n.... ....F.&9
```

```
24E0:  80 C0 01 74 03 E9 06 00  B8 01 00 E9 22 00 B8 1A   ...t.... ...."...
24F0:  00 F7 6E 08 8B F0 C4 1E  08 0C 8B 46 06 26 39 80   ..n..... ...F.&9.
2500:  BA 01 74 03 E9 06 00 B8  00 00 E9 03 00 B8 02 00   ..t..... ........
2510:  89 46 F8 B8 1A 00 F7 6E  0C 8B F0 C4 1E 0C 0C 8B   .F.....n ........
2520:  46 0A 26 39 80 C0 01 74  03 E9 06 00 B8 01 00 E9   F.&9...t ........
2530:  22 00 B8 1A 00 F7 6E 0C  8B F0 C4 1E 0C 0C 8B 46   ".....n. .......F
2540:  0A 26 39 80 BA 01 74 03  E9 06 00 B8 00 00 E9 03   .&9...t. ........
2550:  00 B8 02 00 89 46 F0 B8  1A 00 F7 6E 08 8B F0 C4   .....F.. ...n....
2560:  1E 08 0C 26 8B 80 B6 01  89 46 E8 B8 1A 00 F7 6E   ...&.... .F.....n
2570:  08 8B F0 C4 1E 08 0C 26  8B 80 B8 01 89 46 EA B8   .......& .....F..
2580:  1A 00 F7 6E 0C 8B F0 C4  1E 0C 0C 26 8B 80 B6 01   ...n.... ...&....
2590:  89 46 E2 B8 1A 00 F7 6E  0C 8B F0 C4 1E 0C 0C 26   .F.....n .......&
25A0:  8B 80 B8 01 89 46 E4 B8  1A 00 F7 6E 0A 8B F0 8B   .....F.. ...n....
25B0:  46 F4 8B C8 D1 E0 03 C1  D1 E0 03 F0 C4 1E 0C 0C   F....... ........
25C0:  26 8B 80 BC 01 8B C8 B8  1A 00 F7 6E 06 8B F0 8B   &....... ...n....
25D0:  46 FA 8B D0 D1 E0 03 C2  D1 E0 03 F0 C4 1E 08 0C   F....... ........
25E0:  26 2B 88 BC 01 89 4E F2  81 7E F2 B4 00 7F 03 E9   &+....N. ........
25F0:  09 00 8B 46 F2 2D 68 01  E9 16 00 81 7E F2 4C FF   ...F.-h. ....~.L.
2600:  7D 03 E9 06 00 8B 46 F2  E9 06 00 8B 46 F2 05 68   }.....F. ....F..h
2610:  01 50 9A EA 29 E5 0A 83  C4 02 89 46 F2 B8 1A 00   .P..)... ...F....
2620:  F7 6E 0C 8B F0 8B 46 F0  8B C8 D1 E0 03 C1 D1 E0   .n....F. ........
2630:  03 F0 C4 1E 0C 0C 26 8B  80 BC 01 8B C8 B8 1A 00   ......&. ........
2640:  F7 6E 08 8B F0 C4 1E 08  0C 26 2B 88 C2 01 89 4E   .n...... .&+....N
2650:  EE 81 7E EE B4 00 7F 03  E9 09 00 8B 46 EE 2D 68   ..~..... ....F.-h
2660:  01 E9 16 00 81 7E EE 4C  FF 7D 03 E9 06 00 8B 46   .....~.L .}.....F
2670:  EE E9 06 00 8B 46 EE 05  68 01 50 9A EA 29 E5 0A   .....F.. h.P..)..
2680:  83 C4 02 89 46 EE 8B 46  EC 2B 46 F6 50 9A EA 29   ....F..F .+F.P..)
2690:  E5 0A 83 C4 02 89 46 FE  8B 46 E2 2B 46 E8 99 52   ......F. .F.+F..R
26A0:  50 52 50 9A FA 2A E5 0A  8B C8 8B 46 E4 2B 46 EA   PRP..*.. ...F.+F.
26B0:  8B DA 99 52 50 52 50 8B  F1 8B FB 9A FA 2A E5 0A   ...RPRP. .....*..
26C0:  03 F0 13 FA 57 56 9A 3A  01 42 08 83 C4 04 89 46   ....WV.: .B.....F
26D0:  E6 8B 46 E6 03 46 EE 03  46 F2 89 46 FC B8 1A 00   ..F..F.. F..F....
26E0:  F7 6E 0C 8B F0 C4 1E 0C  0C 26 F6 80 CE 01 01 75   .n...... .&.....u
26F0:  03 E9 26 00 B8 1A 00 F7  6E 08 8B F0 C4 1E 08 0C   ..&..... n.......
2700:  26 F6 80 CE 01 01 75 03  E9 0F 00 83 7E FC 50 7F   &.....u. ....~.P.
2710:  03 E9 06 00 B8 00 00 E9  43 00 B8 1A 00 F7 6E 0C   ........ C.....n.
2720:  8B F0 C4 1E 0C 0C 26 F6  80 CE 01 01 75 03 E9 17   ......&. ....u...
2730:  00 B8 1A 00 F7 6E 08 8B  F0 C4 1E 08 0C 26 F6 80   .....n.. .....&..
2740:  CE 01 01 74 03 E9 0F 00  83 7E FC 64 7F 03 E9 06   ...t.... .~.d....
2750:  00 B8 00 00 E9 06 00 B8  01 00 E9 00 00 5E 5F 8B   ........ .....^_.
2760:  E5 5D CB 55 8B EC 81 EC  02 00 57 56 FF 76 1C FF   .].U.... ..WV.v..
2770:  76 1A FF 76 18 FF 76 16  FF 76 14 FF 76 12 FF 76   v..v..v. .v..v..v
2780:  10 FF 76 0E FF 76 0C FF  76 0A FF 76 08 FF 76 06   ..v..v.. v..v..v.
2790:  9A FD 09 73 08 83 C4 18  89 46 FE 8B 46 FE E9 00   ...s.... .F..F...
27A0:  00 5E 5F 8B E5 5D CB 55  8B EC 81 EC 00 00 57 56   .^_..].U ......WV
27B0:  C4 5E 0E 26 83 3F FF 74  03 E9 06 00 B8 FF FF E9   .^.&.?.t ........
27C0:  4A 00 C4 5E 0E 26 FF 37  FF 76 08 FF 76 06 9A 08   J..^.&.7 .v..v...
27D0:  00 73 08 83 C4 06 C4 5E  0E 26 89 07 C4 5E 0E 26   .s.....^ .&...^.&
27E0:  83 3F FF 74 03 E9 06 00  B8 FF FF E9 1E 00 B8 1A   .?.t.... ........
27F0:  00 C4 5E 0E 26 F7 2F 8B  F0 C4 5E 06 26 8B 40 0A   ..^.&./. ..^.&.@.
2800:  C4 5E 0A 26 89 07 B8 00  00 E9 00 00 5E 5F 8B E5   .^.&.... ....^_..
2810:  5D CB 55 8B EC 81 EC 04  00 57 56 B8 1A 00 F7 6E   ].U..... .WV....n
2820:  06 8B 76 0A 8B CE D1 E6  03 F1 D1 E6 03 F0 C4 1E   ..v..... ........
2830:  0C 0C 26 8B 80 BE 01 2B  46 0C 50 9A EA 29 E5 0A   ..&....+ F.P..)..
```

```
2840:  83 C4 02 8B C8 B8 14 00  F7 6E 0C BB 64 00 99 F7   ........ .n..d...
2850:  FB 3B C1 7C 03 E9 06 00  B8 00 00 E9 5A 00 B9 1A   .;.|.... ....Z...
2860:  00 8B 46 06 2B 46 08 F7  E9 D1 F8 99 52 50 52 50   ..F.+F.. ....RPRP
2870:  9A FA 2A E5 0A D1 E0 D1  D2 52 50 9A 3A 01 42 08   ..*..... .RP.:.B.
2880:  83 C4 04 89 46 FE 8B 46  FE 2B 46 0E 50 9A EA 29   ....F..F .+F.P..)
2890:  E5 0A 83 C4 02 89 46 FC  B8 14 00 F7 6E 0E B9 64   ......F. ....n..d
28A0:  00 99 F7 F9 3B 46 FC 7C  03 E9 06 00 B8 00 00 E9   ....;F.| ........
28B0:  06 00 B8 01 00 E9 00 00  5E 5F 8B E5 5D CB 55 8B   ........ ^_..].U.
28C0:  EC 81 EC 14 00 57 56 C7  46 FE 32 00 8E 06 C0 0A   .....WV. F.2.....
28D0:  26 83 3E 8A 01 00 74 03  E9 DF 00 FF 76 06 9A A1   &.>...t. ....v...
28E0:  00 42 08 83 C4 02 99 89  46 F8 89 56 FA 8B 46 FA   .B...... F..V..F.
28F0:  0B 46 F8 74 03 E9 0A 00  C7 46 F8 64 00 C7 46 FA   .F.t.... .F.d..F.
2900:  00 00 8B 46 08 99 89 46  EC 89 56 EE B8 10 27 BA   ...F...F ..V...'.
2910:  00 00 52 50 8D 4E EC 51  9A 58 2B E5 0A 8B 46 F8   ..RP.N.Q .X+...F.
2920:  8B 56 FA 89 46 F0 89 56  F2 FF 76 F2 FF 76 F0 FF   .V..F..V ..v..v..
2930:  76 EE FF 76 EC 9A 60 2A  E5 0A 89 46 F4 89 56 F6   v..v..`* ...F..V.
2940:  8B 46 F4 3B 46 FE 7F 03  E9 03 00 8B 46 FE 89 46   .F.;F... ....F..F
2950:  FC 8B 46 FE F7 D8 3B 46  FC 7C 03 E9 03 00 8B 46   ..F...;F .|.....F
2960:  FC 89 46 FC 8B 46 FC C4  5E 0E 26 29 07 8B 46 08   ..F..F.. ^.&)..F.
2970:  C4 5E 0A 26 01 07 8B 46  FC 99 89 46 EC 89 56 EE   .^.&...F ...F..V.
2980:  FF 76 06 9A 08 00 42 08  83 C4 02 99 52 50 8D 46   .v....B. ....RP.F
2990:  EC 50 9A 58 2B E5 0A B8  10 27 BA 00 00 52 50 FF   .P.X+... .'...RP.
29A0:  76 EE FF 76 EC 9A 60 2A  E5 0A 89 46 F4 89 56 F6   v..v..`* ...F..V.
29B0:  8B 46 F4 C4 5E 0A 26 29  47 02 5E 5F 8B E5 5D CB   .F..^.&) G.^_..].
29C0:  55 8B EC 81 EC 08 00 57  56 C4 5E 06 26 83 7F 0E   U......W V.^.&...
29D0:  01 1B C0 40 89 46 F8 C7  46 FE 00 00 C7 46 FA 00   ...@.F.. F....F..
29E0:  00 E9 03 00 FF 46 FA C4  5E 06 8B 46 FA 26 39 07   .....F.. ^..F.&9.
29F0:  7F 03 E9 A4 00 81 7E FE  C8 00 7C 03 E9 9A 00 8B   ......~. ..|.....
2A00:  76 FA D1 E6 C4 5E 06 26  8B 40 26 89 46 FC 83 7E   v....^.& .@&.F..~
2A10:  FC FF 74 03 E9 03 00 E9  CA FF 83 7E FC FF 75 03   ..t..... ...~..u.
2A20:  E9 73 00 B8 1A 00 F7 6E  FC 8B F0 C4 5E 06 26 F6   .s.....n ....^.&.
2A30:  80 CE 01 08 75 03 E9 41  00 8E 06 C2 0A 26 83 3E   ....u..A .....&.>
2A40:  82 01 00 75 03 E9 1F 00  83 7E F8 00 75 03 E9 16   ...u.... .~..u...
2A50:  00 B8 1A 00 F7 6E FC 8B  F0 C4 5E 06 26 F6 80 CE   .....n.. ..^.&...
2A60:  01 80 75 03 E9 13 00 8B  5E FE D1 E3 D1 E3 C4 76   ..u..... ^......v
2A70:  0A 8B 46 FC 26 89 00 FF  46 FE FF 76 FC 8B 46 06   ..F.&... F..v..F.
2A80:  8B 56 08 05 B6 01 52 50  9A 08 00 73 08 83 C4 06   .V....RP ...s....
2A90:  89 46 FC E9 84 FF E9 4B  FF 8B 46 FE C4 5E 0E 26   .F.....K ..F..^.&
2AA0:  89 07 5E 5F 8B E5 5D CB  55 8B EC 81 EC 00 00 57   ..^_..]. U......W
2AB0:  56 B8 02 00 B9 9E 0D 51  50 B8 3A 69 B9 9E 0D 51   V......Q P.:i...Q
2AC0:  50 B8 60 00 B9 9E 0D 51  50 9A 00 00 7C 02 83 C4   P.`....Q P...|...
2AD0:  0C B8 00 00 B9 9E 0D 51  50 B8 18 66 B9 9E 0D 51   .......Q P..f...Q
2AE0:  50 B8 AA 89 B9 9E 0D 51  50 9A 00 00 7C 02 83 C4   P......Q P...|...
2AF0:  0C B8 56 F7 B9 9E 0D 51  50 9A 6A 01 7C 02 83 C4   ..V....Q P.j.|...
2B00:  04 FF 76 14 FF 76 12 FF  76 10 FF 76 0E FF 76 0C   ..v..v.. v..v..v.
2B10:  FF 76 0A FF 76 08 FF 76  06 9A 82 02 7C 02 83 C4   .v..v..v ....|...
2B20:  10 E9 00 00 5E 5F 8B E5  5D CB 55 8B EC 81 EC 12   ....^_.. ].U.....
2B30:  00 57 56 C7 46 FE 00 00  C7 46 FA 00 00 E9 03 00   .WV.F... .F......
2B40:  FF 46 FA 8E 06 C4 0A 8B  46 FA 26 39 06 02 00 7F   .F...... F.&9....
2B50:  03 E9 DF 00 83 7E FE 32  7C 03 E9 D6 00 8D 46 EE   .....~.2 |.....F.
2B60:  16 50 B8 1A 00 8E 06 C6  0A 8B 5E FA D1 E3 D1 E3   .P...... ..^.....
2B70:  26 F7 AF 3A 69 05 1A 02  B9 9E 0D 51 50 9A 00 00   &..:i... ...QP...
2B80:  C3 03 83 C4 08 C7 46 FC  00 00 E9 03 00 FF 46 FC   ......F. ......F.
2B90:  8E 06 C8 0A 8B 46 FC 26  39 06 00 00 7F 03 E9 8F   .....F.& 9.......
```

```
2BA0:  00 83 7E FE 32 7C 03 E9  86 00 8D 46 F4 16 50 B8   ..~.2|.. ...F..P.
2BB0:  1A 00 8E 06 CA 0A 8B 5E  FC D1 E3 D1 E3 26 F7 AF   .......^ .....&..
2BC0:  18 66 05 64 8B B9 9E 0D  51 50 9A 00 00 C3 03 83   .f.d.... QP......
2BD0:  C4 08 8D 46 F4 16 50 8D  46 EE 16 50 9A 31 01 C3   ...F..P. F..P.1..
2BE0:  03 83 C4 08 3D 00 00 75  03 E9 41 00 8E 06 C6 0A   ....=..u ..A.....
2BF0:  8B 5E FA D1 E3 D1 E3 26  8B 87 3A 69 8E 06 CC 0A   .^.....& ..:i....
2C00:  B1 03 8B 5E FE D3 E3 26  89 87 5E 6C 8E 06 CA 0A   ...^...& ..^l....
2C10:  8B 5E FC D1 E3 D1 E3 26  8B 87 18 66 8B 5E FE D3   .^.....& ...f.^..
2C20:  E3 8E 06 CC 0A 26 89 87  60 6C FF 46 FE E9 5D FF   .....&.. `l.F..].
2C30:  E9 0D FF 8B 46 FE C4 5E  06 26 89 07 5E 5F 8B E5   ....F..^ .&..^_..
2C40:  5D CB 55 8B EC 81 EC 2A  00 57 56 B8 00 00 89 46   ].U....* .WV....F
2C50:  DE 89 46 E0 C7 46 E2 00  00 E9 03 00 FF 46 E2 8E   ..F..F.. .....F..
2C60:  06 CE 0A 8B 46 E2 26 39  06 56 F7 7F 03 E9 15 00   ....F.&9 .V......
2C70:  8E 06 CC 0A B1 03 8B 5E  E2 D3 E3 26 C7 87 64 6C   .......^ ...&..dl
2C80:  00 00 E9 D7 FF C7 46 E4  00 00 E9 03 00 FF 46 E4   ......F. ......F.
2C90:  8E 06 CE 0A 8B 46 E4 26  39 06 56 F7 7F 03 E9 C8   .....F.& 9.V.....
2CA0:  04 8E 06 CC 0A B1 03 8B  5E E4 D3 E3 26 8B 87 5E   ........ ^...&..^
2CB0:  6C 89 46 F6 8B 5E E4 D3  E3 26 8B 87 60 6C 89 46   l.F..^.. .&..`l.F
2CC0:  FE C7 46 E2 00 00 E9 03  00 FF 46 E2 8E 06 CE 0A   ..F..... ..F.....
2CD0:  8B 46 E2 26 39 06 56 F7  7F 03 E9 15 00 8E 06 CC   .F.&9.V. ........
2CE0:  0A B1 03 8B 5E E2 D3 E3  26 C7 87 62 6C 00 00 E9   ....^... &..bl...
2CF0:  D7 FF B8 00 00 89 46 E6  89 46 F2 C7 46 E8 64 00   ......F. .F..F.d.
2D00:  C7 46 F0 01 00 C7 46 D6  FF FF C7 46 E2 00 00 E9   .F....F. ...F....
2D10:  03 00 FF 46 E2 8E 06 CE  0A 8B 46 E2 26 39 06 56   ...F.... ..F.&9.V
2D20:  F7 7F 03 E9 7F 03 8B 46  E4 39 46 E2 75 03 E9 48   .......F .9F.u..H
2D30:  00 8E 06 CC 0A B1 03 8B  5E E2 D3 E3 26 83 BF 62   ........ ^...&..b
2D40:  6C FF 75 03 E9 32 00 8B  5E E4 D3 E3 26 8B 87 5E   l.u..2.. ^...&..^
2D50:  6C 8B 5E E2 D3 E3 26 39  87 5E 6C 75 03 E9 19 00   l.^...&9 .^lu....
2D60:  8B 5E E4 D3 E3 26 8B 87  60 6C 8B 5E E2 D3 E3 26   .^...&.. `l.^...&
2D70:  39 87 60 6C 74 03 E9 03  00 E9 96 FF 8E 06 CC 0A   9.`lt... ........
2D80:  B1 03 8B 5E E2 D3 E3 26  8B 87 5E 6C 89 46 EE 8B   ...^...& ..^l.F..
2D90:  5E E2 D3 E3 26 8B 87 60  6C 89 46 FC B8 1A 00 F7   ^...&..` l.F.....
2DA0:  6E FC 8B D8 8E 06 D0 0A  26 8B 87 60 8B 8B D0 B8   n....... &..`....
2DB0:  1A 00 8B DA F7 6E FE 8B  F0 26 2B 9C 60 8B B8 1A   .....n.. .&+.`...
2DC0:  00 F7 6E EE 8B F0 8E 06  D2 0A 26 2B 9C 16 02 B8   ..n..... ..&+....
2DD0:  1A 00 F7 6E F6 8B F0 26  03 9C 16 02 53 9A EA 29   ...n...& ....S..)
2DE0:  E5 0A 83 C4 02 89 46 FA  B8 1A 00 F7 6E FC 8B D8   ......F. ....n...
2DF0:  8E 06 D0 0A 26 8B 87 62  8B 8B C8 B8 1A 00 F7 6E   ....&..b .......n
2E00:  FE 8B D8 26 2B 8F 62 8B  B8 1A 00 F7 6E EE 8B D8   ...&+.b. ....n...
2E10:  8E 06 D2 0A 26 2B 8F 18  02 B8 1A 00 F7 6E F6 8B   ....&+.. .....n..
2E20:  D8 26 03 8F 18 02 51 9A  EA 29 E5 0A 83 C4 02 89   .&....Q. .)......
2E30:  46 F4 B8 1A 00 F7 6E EE  8B D8 8E 06 D2 0A B8 1A   F.....n. ........
2E40:  00 F7 6E F6 8B F0 26 8B  84 18 02 26 2B 87 18 02   ..n...&. ...&+...
2E50:  99 52 50 52 50 9A FA 2A  E5 0A 8B C8 B8 1A 00 8B   .RPRP..* ........
2E60:  DA F7 6E EE 8B F0 8E 06  D2 0A B8 1A 00 F7 6E F6   ..n..... ......n.
2E70:  8B F8 26 8B 85 16 02 26  2B 84 16 02 99 52 50 52   ..&....& +....RPR
2E80:  50 8B F1 8B FB 9A FA 2A  E5 0A 03 F0 13 FA 57 56   P......* ......WV
2E90:  9A 3A 01 42 08 83 C4 04  89 46 EC B8 1A 00 F7 6E   .:.B.... .F.....n
2EA0:  FC 8B D8 8E 06 D0 0A B8  1A 00 F7 6E FE 8B F0 26   ........ ...n...&
2EB0:  8B 84 62 8B 26 2B 87 62  8B 99 52 50 52 50 9A FA   ..b.&+.b ..RPRP..
2EC0:  2A E5 0A 8B C8 B8 1A 00  8B DA F7 6E FC 8B F0 8E   *....... ...n....
2ED0:  06 D0 0A B8 1A 00 F7 6E  FE 8B F8 26 8B 85 60 8B   .......n ...&..`.
2EE0:  26 2B 84 60 8B 99 52 50  52 50 8B F1 8B FB 9A FA   &+.`..RP RP......
2EF0:  2A E5 0A 03 F0 13 FA 57  56 9A 3A 01 42 08 83 C4   *......W V.:.B...
```

```
2F00:  04 89 46 F8 8B 46 EC 2B  46 F8 50 9A EA 29 E5 0A   ..F..F.+ F.P..)..
2F10:  83 C4 02 89 46 D8 B8 1A  00 F7 6E EE 8B D8 8E 06   ....F... ..n.....
2F20:  D2 0A 26 FF B7 18 02 B8  1A 00 F7 6E EE 8B D8 26   ..&..... ...n...&
2F30:  FF B7 16 02 B8 1A 00 F7  6E F6 8B D8 26 FF B7 18   ........ n...&...
2F40:  02 B8 1A 00 F7 6E F6 8B  D8 26 FF B7 16 02 B8 1A   .....n.. .&......
2F50:  00 F7 6E FC 8B D8 8E 06  D0 0A 26 FF B7 62 8B B8   ..n..... ..&..b..
2F60:  1A 00 F7 6E FC 8B D8 26  FF B7 60 8B B8 1A 00 F7   ...n...& ..`.....
2F70:  6E FE 8B D8 26 FF B7 62  8B B8 1A 00 F7 6E FE 8B   n...&..b .....n..
2F80:  D8 26 FF B7 60 8B 9A 8A  01 73 08 83 C4 10 50 9A   .&..`... .s....P.
2F90:  EA 29 E5 0A 83 C4 02 89  46 EA 83 7E FA 14 7C 03   .)...... F..~..|.
2FA0:  E9 FF 00 83 7E F4 14 7C  03 E9 F6 00 83 7E D8 14   ....~..| .....~..
2FB0:  7C 03 E9 ED 00 FF 76 EA  9A EA 29 E5 0A 83 C4 02   |.....v. ..).....
2FC0:  3D 12 00 7C 03 E9 DA 00  8E 06 CC 0A B1 03 8B 5E   =..|.... .......^
2FD0:  E4 D3 E3 26 C7 87 62 6C  01 00 8B 5E E2 D3 E3 26   ...&..bl ...^...&
2FE0:  C7 87 62 6C 01 00 83 7E  EC 00 7F 03 E9 09 00 FF   ..bl...~ ........
2FF0:  46 F2 8B 46 D8 01 46 E6  8B 46 E8 39 46 D8 7C 03   F..F..F. .F.9F.|.
3000:  E9 1D 00 8B 46 F0 39 46  EC 7D 03 E9 12 00 8B 46   ....F.9F .}.....F
3010:  D8 89 46 E8 8B 46 EC 89  46 F0 8B 46 E2 89 46 D6   ..F..F.. F..F..F.
3020:  C7 46 DC 00 00 E9 03 00  FF 46 DC 8E 06 CE 0A 8B   .F...... .F......
3030:  46 DC 26 39 06 56 F7 7F  03 E9 66 00 8B 46 E4 39   F.&9.V.. ..f..F.9
3040:  46 DC 75 03 E9 0B 00 8B  46 E2 39 46 DC 74 03 E9   F.u..... F.9F.t..
3050:  03 00 E9 D3 FF 8E 06 CC  0A B1 03 8B 5E E2 D3 E3   ........ ....^...
3060:  26 8B 87 5E 6C 8B 5E DC  D3 E3 26 39 87 5E 6C 75   &..^l.^. ..&9.^lu
3070:  03 E9 19 00 8B 5E E2 D3  E3 26 8B 87 60 6C 8B 5E   .....^.. .&..`l.^
3080:  DC D3 E3 26 39 87 60 6C  74 03 E9 12 00 8E 06 CC   ...&9.`l t.......
3090:  0A B1 03 8B 5E DC D3 E3  26 C7 87 62 6C FF FF E9   ....^... &..bl...
30A0:  86 FF E9 6D FC 8B 46 F2  39 46 DE 7D 03 E9 1F 00   ...m..F. 9F.}....
30B0:  8B 46 F2 39 46 DE 74 03  E9 AB 00 8B 46 E6 39 46   .F.9F.t. ....F.9F
30C0:  E0 7F 03 E9 A0 00 83 7E  D6 FF 7F 03 E9 97 00 8E   .......~ ........
30D0:  06 CC 0A B1 03 8B 5E E4  D3 E3 26 8B 87 60 6C C4   ......^. ..&..`l.
30E0:  5E 0E 26 89 07 8E 06 CC  0A 8B 5E D6 D3 E3 26 8B   ^.&..... ..^...&.
30F0:  87 60 6C C4 5E 12 26 89  07 8E 06 CC 0A 8B 5E E4   .`l.^.&. ......^.
3100:  D3 E3 26 8B 87 5E 6C C4  5E 06 26 89 07 8E 06 CC   ..&..^l. ^.&.....
3110:  0A 8B 5E D6 D3 E3 26 8B  87 5E 6C C4 5E 0A 26 89   ..^...&. .^l.^.&.
3120:  07 8B 46 F2 89 46 DE 8B  46 E6 89 46 E0 C7 46 DC   ..F..F.. F..F..F.
3130:  00 00 E9 03 00 FF 46 DC  8E 06 CE 0A 8B 46 DC 26   ......F. .....F.&
3140:  39 06 56 F7 7F 03 E9 1D  00 8E 06 CC 0A B1 03 8B   9.V..... ........
3150:  5E DC D3 E3 26 8B 87 62  6C 8B 5E DC D3 E3 26 89   ^...&..b l.^...&.
3160:  87 64 6C E9 CF FF E9 24  FB C7 46 DA 00 00 C7 46   .dl....$ ..F....F
3170:  DC 00 00 E9 03 00 FF 46  DC 8E 06 CE 0A 8B 46 DC   .......F ......F.
3180:  26 39 06 56 F7 7F 03 E9  9F 00 8E 06 CC 0A B1 03   &9.V.... ........
3190:  8B 5E DC D3 E3 26 83 BF  64 6C 00 7F 03 E9 86 00   .^...&.. dl......
31A0:  8B 5E DC D3 E3 26 8B 87  60 6C 89 46 FE 8B 5E DC   .^...&.. `l.F..^.
31B0:  D3 E3 26 8B 87 5E 6C 89  46 F6 B8 1A 00 F7 6E FE   ..&..^l. F.....n.
31C0:  8B D8 8E 06 D0 0A 26 8B  87 60 8B 8B C8 B8 1A 00   ......&. .`......
31D0:  F7 6E F6 8B D8 8E 06 D2  0A 26 2B 8F 16 02 89 4E   .n...... .&+....N
31E0:  FA B8 1A 00 F7 6E FE 8B  D8 8E 06 D0 0A 26 8B 87   .....n.. .....&..
31F0:  62 8B 8B C8 B8 1A 00 F7  6E F6 8B D8 8E 06 D2 0A   b....... n.......
3200:  26 2B 8F 18 02 89 4E F4  83 7E DA 0A 7C 03 E9 15   &+....N. .~..|...
3210:  00 B8 01 00 50 FF 76 F4  FF 76 FA 9A 91 28 E8 03   ....P.v. .v...(..
3220:  83 C4 06 FF 46 DA E9 4D  FF 83 7E DE 00 7F 03 E9   ....F..M ..~.....
3230:  23 00 FF 76 E8 C4 5E 0A  26 FF 37 C4 5E 06 26 FF   #..v..^. &.7.^.&.
3240:  37 C4 5E 12 26 FF 37 C4  5E 0E 26 FF 37 9A 90 25   7.^.&.7. ^.&.7..%
3250:  E8 03 83 C4 0A 8B 46 DE  E9 00 00 5E 5F 8B E5 5D   ......F. ...^_..]
```

```
3260:  CB 55 8B EC 81 EC 08 00  57 56 FF 76 0E FF 76 14   .U...... WV.v..v.
3270:  FF 76 0C FF 76 0A 9A CC  01 C3 03 83 C4 08 89 46   .v..v... .......F
3280:  F8 FF 76 0E FF 76 18 FF  76 0C FF 76 0A 9A CC 01   ..v..v.. v..v....
3290:  C3 03 83 C4 08 89 46 FC  C7 46 FE 00 00 8B 46 F8   ......F. .F....F.
32A0:  89 46 FA E9 03 00 FF 46  FA 8B 46 FC 39 46 FA 7E   .F.....F ..F.9F.~
32B0:  03 E9 E8 00 81 7E FE C8  00 7C 03 E9 DE 00 8B 76   .....~.. .|.....v
32C0:  FA 8B C6 D1 E6 03 F0 D1  E6 C4 5E 0A 8B 46 16 26   ........ ..^..F.&
32D0:  39 40 02 7D 03 E9 C1 00  8B 76 FA 8B C6 D1 E6 03   9@.}.... .v......
32E0:  F0 D1 E6 C4 5E 0A 8B 46  1A 26 39 40 02 7E 03 E9   ....^..F .&9@.~..
32F0:  A7 00 B8 1A 00 8B 76 FA  8B CE D1 E6 03 F1 D1 E6   ......v. ........
3300:  C4 5E 0A 26 F7 68 04 8B  F0 C4 5E 06 26 F6 40 18   .^.&.h.. ..^.&.@.
3310:  01 75 03 E9 83 00 B8 1A  00 8B 76 FA 8B CE D1 E6   .u...... ..v.....
3320:  03 F1 D1 E6 C4 5E 0A 26  F7 68 04 8B F0 C4 5E 06   .....^.& .h....^.
3330:  26 F6 40 18 10 75 03 E9  5F 00 8E 06 C2 0A 26 83   &.@..u.. _.....&.
3340:  3E 82 01 00 75 03 E9 2D  00 83 7E 1C 00 75 03 E9   >...u..- ..~..u..
3350:  24 00 B8 1A 00 8B 76 FA  8B CE D1 E6 03 F1 D1 E6   $.....v. ........
3360:  C4 5E 0A 26 F7 68 04 8B  F0 C4 5E 06 26 F6 40 18   .^.&.h.. ..^.&.@.
3370:  80 75 03 E9 23 00 8B 76  FE D1 E6 D1 E6 C4 5E 10   .u..#..v ......^.
3380:  26 C7 40 02 00 00 8B 5E  FE D1 E3 D1 E3 C4 76 10   &.@....^ ......v.
3390:  8B 46 FA 26 89 00 FF 46  FE E9 0A FF 8B 46 FE E9   .F.&...F .....F..
33A0:  00 00 5E 5F 8B E5 5D CB  55 8B EC 81 EC 16 00 57   ..^_..]. U......W
33B0:  56 C7 46 FE 00 00 C7 46  EE 00 00 E9 03 00 FF 46   V.F....F .......F
33C0:  EE 8B 46 08 39 46 EE 7C  03 E9 F7 02 81 7E FE C8   ..F.9F.| .....~..
33D0:  00 7C 03 E9 ED 02 8E 06  C6 0A 8B 5E EE D1 E3 D1   .|...... ...^....
33E0:  E3 26 8B 9F 3A 69 8B C3  D1 E3 03 D8 D1 E3 8E 06   .&..:i.. ........
33F0:  D2 0A 26 8B 87 5A 53 89  46 F8 B8 1A 00 F7 6E F8   ..&..ZS. F.....n.
3400:  8B D8 26 F6 87 2E 02 08  75 03 E9 1E 00 B8 4C 00   ..&..... u.....L.
3410:  B9 9E 0D 51 50 B8 1A 00  F7 6E F8 05 1A 02 06 50   ...QP... .n.....P
3420:  9A 00 00 C3 03 83 C4 08  E9 44 00 B8 1A 00 F7 6E   ........ .D.....n
3430:  F8 8B D8 8E 06 D2 0A 26  8B 87 22 02 8B C8 B8 1A   .......& ..".....
3440:  00 F7 6E F8 8B D8 26 3B  8F 28 02 7C 03 E9 05 00   ..n...&; .(.|....
3450:  26 8B 8F 28 02 B8 1A 00  F7 6E F8 8B D8 26 3B 8F   &..(.... .n...&;.
3460:  1C 02 7C 03 E9 05 00 26  8B 8F 1C 02 89 4E F0 C7   ..|....& .....N..
3470:  46 F2 00 00 E9 03 00 FF  46 F2 8B 46 06 39 46 F2   F....... F..F.9F.
3480:  7C 03 E9 3B 02 81 7E FE  C8 00 7C 03 E9 31 02 8E   |..;..~. ..|..1..
3490:  06 CA 0A 8B 5E F2 D1 E3  D1 E3 26 8B 9F 18 66 8B   ....^... ..&...f.
34A0:  C3 D1 E3 03 D8 D1 E3 8E  06 D0 0A 26 8B 87 A4 DC   ........ ...&....
34B0:  89 46 FC 8E 06 C6 0A 8B  5E EE D1 E3 D1 E3 26 8B   .F...... ^.....&.
34C0:  9F 3A 69 8B C3 D1 E3 03  D8 D1 E3 8E 06 D2 0A 26   .:i..... .......&
34D0:  8B 87 56 53 89 46 EC 8E  06 C6 0A 8B 5E EE D1 E3   ..VS.F.. ....^...
34E0:  D1 E3 26 8B 9F 3A 69 8B  C3 D1 E3 03 D8 D1 E3 8E   ..&..:i. ........
34F0:  06 D2 0A 26 8B 87 58 53  89 46 EA B8 1A 00 F7 6E   ...&..XS .F.....n
3500:  FC 8B D8 8E 06 D0 0A 8B  46 EC 26 2B 87 60 8B 89   ........ F.&+.`..
3510:  46 FA B8 1A 00 F7 6E FC  8B D8 8B 46 EA 26 2B 87   F.....n. ...F.&+.
3520:  62 8B 89 46 F6 FF 76 FA  9A EA 29 E5 0A 83 C4 02   b..F..v. ..).....
3530:  3D 2D 00 7E 03 E9 13 00  FF 76 F6 9A EA 29 E5 0A   =-.~.... .v...)..
3540:  83 C4 02 3D 2D 00 7F 03  E9 03 00 E9 29 FF B8 1A   ...=-... ....)...
3550:  00 F7 6E F8 8B D8 8E 06  D2 0A 26 F6 87 2E 02 08   ..n..... ..&.....
3560:  74 03 E9 17 00 B8 1A 00  F7 6E FC 8B D8 8E 06 D0   t....... .n......
3570:  0A 26 F6 87 78 8B 08 74  03 E9 2E 00 B8 1A 00 F7   .&..x..t ........
3580:  6E F8 8B D8 8E 06 D2 0A  26 F6 87 2E 02 08 75 03   n....... &.....u.
3590:  E9 1A 00 B8 1A 00 F7 6E  FC 8B D8 8E 06 D0 0A 26   .......n .......&
35A0:  F6 87 78 8B 08 74 03 E9  03 00 E9 CA FE B8 1A 00   ..x..t.. ........
35B0:  F7 6E FC 8B D8 8E 06 D0  0A 26 F6 87 78 8B 08 75   .n...... .&..x..u
```

```
35C0:  03 E9 7B 00 B8 1A 00 F7  6E F8 8B D8 8E 06 D2 0A   ..{..... n.......
35D0:  26 F6 87 2E 02 08 75 03  E9 64 00 B8 44 00 B9 9E   &.....u. .d..D...
35E0:  0D 51 50 B8 1A 00 F7 6E  FC 05 64 8B BA 9E 0D 52   .QP....n ..d....R
35F0:  50 9A 00 00 C3 03 83 C4  08 B8 44 00 B9 9E 0D 51   P....... ..D....Q
3600:  50 B8 4C 00 B9 9E 0D 51  50 9A 31 01 C3 03 83 C4   P.L....Q P.1.....
3610:  08 3D 00 00 75 03 E9 23  00 8B 46 FC 8E 06 CC 0A   .=..u..# ..F.....
3620:  B1 03 8B 5E FE D3 E3 26  89 87 60 6C 8B 46 F8 8B   ...^...& ..`l.F..
3630:  5E FE D3 E3 26 89 87 5E  6C FF 46 FE E9 7E 00 B8   ^...&..^ l.F..~..
3640:  1A 00 F7 6E FC 8B D8 8E  06 D0 0A 26 8B 87 6C 8B   ...n.... ...&..l.
3650:  8B C8 B8 1A 00 F7 6E FC  8B D8 26 3B 8F 72 8B 7C   ......n. ..&;.r.|
3660:  03 E9 05 00 26 8B 8F 72  8B B8 1A 00 F7 6E FC 8B   ....&..r .....n..
3670:  D8 26 3B 8F 66 8B 7C 03  E9 05 00 26 8B 8F 66 8B   .&;.f.|. ...&..f.
3680:  89 4E F4 8B 46 F4 2B 46  F0 50 9A EA 29 E5 0A 83   .N..F.+F .P..)...
3690:  C4 02 3D 12 00 7C 03 E9  23 00 8B 46 FC 8E 06 CC   ..=..|.. #..F....
36A0:  0A B1 03 8B 5E FE D3 E3  26 89 87 60 6C 8B 46 F8   ....^... &..`l.F.
36B0:  8B 5E FE D3 E3 26 89 87  5E 6C FF 46 FE E9 B7 FD   .^...&.. ^l.F....
36C0:  E9 FB FC 8B 46 FE 8E 06  CE 0A 26 A3 56 F7 5E 5F   ....F... ..&.V.^_
36D0:  8B E5 5D CB 55 8B EC 81  EC 16 00 57 56 B8 00 00   ..].U... ...WV...
36E0:  C4 5E 0E 26 89 07 C4 5E  0A 26 89 07 C7 46 EE 00   .^.&...^ .&...F..
36F0:  00 E9 03 00 FF 46 EE 8B  46 08 39 46 EE 7C 03 E9   .....F.. F.9F.|..
3700:  43 05 8E 06 C6 0A 8B 5E  EE D1 E3 D1 E3 26 83 BF   C......^ .....&..
3710:  3C 69 00 75 03 E9 03 00  E9 D9 FF 8E 06 C6 0A 8B   <i.u.... ........
3720:  5E EE D1 E3 D1 E3 26 8B  9F 3A 69 8B C3 D1 E3 03   ^.....&. .:i.....
3730:  D8 D1 E3 8E 06 D2 0A 26  8B 87 5A 53 89 46 FA C7   .......& ..ZS.F..
3740:  46 F6 00 00 B8 1A 00 F7  6E FA 8B D8 26 F6 87 2E   F....... n...&...
3750:  02 08 75 03 E9 1E 00 B8  4C 00 B9 9E 0D 51 50 B8   ..u..... L....QP.
3760:  1A 00 F7 6E FA 05 1A 02  06 50 9A 00 00 C3 03 83   ...n.... .P......
3770:  C4 08 E9 44 00 B8 1A 00  F7 6E FA 8B D8 8E 06 D2   ...D.... .n......
3780:  0A 26 8B 87 28 02 8B C8  B8 1A 00 F7 6E FA 8B D8   .&..(... ....n...
3790:  26 3B 8F 22 02 7C 03 E9  05 00 26 8B 8F 22 02 B8   &;.".|.. ..&.."..
37A0:  1A 00 F7 6E FA 8B D8 26  3B 8F 1C 02 7C 03 E9 05   ...n...& ;...|...
37B0:  00 26 8B 8F 1C 02 89 4E  F0 C7 46 F2 00 00 E9 03   .&.....N ..F.....
37C0:  00 FF 46 F2 8B 46 06 39  46 F2 7C 03 E9 88 03 8E   ..F..F.9 F.|.....
37D0:  06 CA 0A 8B 5E F2 D1 E3  D1 E3 26 83 BF 1A 66 00   ....^... ..&...f.
37E0:  75 03 E9 03 00 E9 D9 FF  8E 06 CA 0A 8B 5E F2 D1   u....... .....^..
37F0:  E3 D1 E3 26 8B 9F 18 66  8B C3 D1 E3 03 D8 D1 E3   ...&...f ........
3800:  8E 06 D0 0A 26 8B 87 A4  DC 89 46 FE 8E 06 C6 0A   ....&... ..F.....
3810:  8B 5E EE D1 E3 D1 E3 26  8B 9F 3A 69 8B C3 D1 E3   .^.....& ..:i....
3820:  03 D8 D1 E3 8E 06 D2 0A  26 8B 87 56 53 89 46 EC   ........ &..VS.F.
3830:  8E 06 C6 0A 8B 5E EE D1  E3 D1 E3 26 8B 9F 3A 69   .....^.. ...&..:i
3840:  8B C3 D1 E3 03 D8 D1 E3  8E 06 D2 0A 26 8B 87 58   ........ ....&..X
3850:  53 89 46 EA B8 1A 00 F7  6E FE 8B D8 8E 06 D0 0A   S.F..... n.......
3860:  8B 46 EC 26 2B 87 60 8B  89 46 FC B8 1A 00 F7 6E   .F.&+.`. .F.....n
3870:  FE 8B D8 8B 46 EA 26 2B  87 62 8B 89 46 F8 FF 76   ....F.&+ .b..F..v
3880:  FC 9A EA 29 E5 0A 83 C4  02 3D 14 00 7E 03 E9 13   ...).... .=..~...
3890:  00 FF 76 F8 9A EA 29 E5  0A 83 C4 02 3D 14 00 7F   ..v...). ....=...
38A0:  03 E9 03 00 E9 1A FF B8  1A 00 F7 6E FA 8B D8 8E   ........ ...n....
38B0:  06 D2 0A 26 F6 87 2E 02  08 74 03 E9 1A 00 B8 1A   ...&.... .t......
38C0:  00 F7 6E FE 8B D8 8E 06  D0 0A 26 F6 87 78 8B 08   ..n..... ..&..x..
38D0:  75 03 E9 03 00 E9 E9 FE  B8 1A 00 F7 6E FE 8B D8   u....... ....n...
38E0:  8E 06 D0 0A 26 F6 87 78  8B 08 75 03 E9 BF 00 B8   ....&..x ..u.....
38F0:  1A 00 F7 6E FA 8B D8 8E  06 D2 0A 26 F6 87 2E 02   ...n.... ...&....
3900:  08 75 03 E9 A8 00 B8 44  00 B9 9E 0D 51 50 B8 1A   .u.....D ....QP..
3910:  00 F7 6E FE 05 64 8B BA  9E 0D 52 50 9A 00 00 C3   ..n..d.. ..RP....
```

```
3920:  03 83 C4 08 B8 44 00 B9  9E 0D 51 50 B8 4C 00 B9   .....D.. ..QP.L..
3930:  9E 0D 51 50 9A 31 01 C3  03 83 C4 08 3D 00 00 75   ..QP.1.. ....=..u
3940:  03 E9 67 00 C4 5E 0A 26  FF 07 C4 5E 0E 26 FF 07   ..g..^.& ...^.&..
3950:  8E 06 C6 0A 8B 5E EE D1  E3 D1 E3 26 C7 87 3C 69   .....^.. ...&..<i
3960:  01 00 8E 06 CA 0A 8B 5E  F2 D1 E3 D1 E3 26 C7 87   .......^ .....&..
3970:  1A 66 01 00 FF 76 FC 9A  EA 29 E5 0A 83 C4 02 99   .f...v.. .)......
3980:  8E 06 D4 0A 26 01 06 1A  F7 26 11 16 1C F7 FF 76   ....&... .&.....v
3990:  F8 9A EA 29 E5 0A 83 C4  02 99 8E 06 D6 0A 26 01   ...).... ......&.
39A0:  06 50 F7 26 11 16 52 F7  E9 AC 01 E9 A6 01 B8 1A   .P.&..R. ........
39B0:  00 F7 6E FE 8B D8 8E 06  D0 0A 26 F6 87 78 8B 08   ..n..... ..&..x..
39C0:  74 03 E9 D6 00 B8 1A 00  F7 6E FA 8B D8 8E 06 D2   t....... .n......
39D0:  0A 26 F6 87 2E 02 08 74  03 E9 BF 00 B8 1A 00 F7   .&.....t ........
39E0:  6E FE 8B D8 8E 06 D0 0A  26 8B 87 72 8B 8B C8 B8   n....... &..r....
39F0:  1A 00 F7 6E FE 8B D8 26  3B 8F 6C 8B 7C 03 E9 05   ...n...& ;.l.|...
3A00:  00 26 8B 8F 6C 8B B8 1A  00 F7 6E FE 8B D8 26 3B   .&..l... ..n...&;
3A10:  8F 66 8B 7C 03 E9 05 00  26 8B 8F 66 8B 89 4E F4   .f.|.... &..f..N.
3A20:  8B 46 F4 2B 46 F0 50 9A  EA 29 E5 0A 83 C4 02 3D   .F.+F.P. .).....=
3A30:  12 00 7C 03 E9 61 00 C4  5E 0A 26 FF 07 8E 06 C6   ..|..a.. ^.&.....
3A40:  0A 8B 5E EE D1 E3 D1 E3  26 C7 87 3C 69 01 00 8E   ..^..... &..<i...
3A50:  06 CA 0A 8B 5E F2 D1 E3  D1 E3 26 C7 87 1A 66 01   ....^... ..&...f.
3A60:  00 FF 76 FC 9A EA 29 E5  0A 83 C4 02 99 8E 06 D4   ..v...). ........
3A70:  0A 26 01 06 1A F7 26 11  16 1C F7 FF 76 F8 9A EA   .&....&. ....v...
3A80:  29 E5 0A 83 C4 02 99 8E  06 D6 0A 26 01 06 50 F7   )....... ...&..P.
3A90:  26 11 16 52 F7 E9 BF 00  E9 B9 00 B8 1A 00 F7 6E   &..R.... .......n
3AA0:  FE 8B D8 8E 06 D0 0A 26  8B 87 72 8B 8B C8 B8 1A   .......& ..r.....
3AB0:  00 F7 6E FE 8B D8 26 3B  8F 6C 8B 7C 03 E9 05 00   ..n...&; .l.|....
3AC0:  26 8B 8F 6C 8B B8 1A 00  F7 6E FE 8B D8 26 3B 8F   &..l.... .n...&;.
3AD0:  66 8B 7C 03 E9 05 00 26  8B 8F 66 8B 89 4E F4 B8   f.|....& ..f..N..
3AE0:  1A 00 F7 6E FA 8B D8 8E  06 D2 0A 26 8B 87 1C 02   ...n.... ...&....
3AF0:  2B 46 F4 50 9A EA 29 E5  0A 83 C4 02 3D 12 00 7D   +F.P..). ....=..}
3B00:  03 E9 4A 00 B8 1A 00 F7  6E FA 8B D8 8E 06 D2 0A   ..J..... n.......
3B10:  26 8B 87 22 02 2B 46 F4  50 9A EA 29 E5 0A 83 C4   &..".+F. P..)....
3B20:  02 3D 12 00 7D 03 E9 25  00 B8 1A 00 F7 6E FA 8B   .=..}..% .....n..
3B30:  D8 8E 06 D2 0A 26 8B 87  28 02 2B 46 F4 50 9A EA   .....&.. (.+F.P..
3B40:  29 E5 0A 83 C4 02 3D 12  00 7C 03 E9 06 00 8B 46   ).....=. .|.....F
3B50:  F2 89 46 F6 E9 6A FC 8E  06 C6 0A 8B 5E EE D1 E3   ..F..j.. ....^...
3B60:  D1 E3 26 83 BF 3C 69 00  74 03 E9 D5 00 83 7E F6   ..&..<i. t.....~.
3B70:  00 7F 03 E9 CC 00 C4 5E  0A 26 FF 07 8B 46 F6 89   .......^ .&...F..
3B80:  46 F2 8E 06 CA 0A 8B 5E  F2 D1 E3 D1 E3 26 8B 9F   F......^ .....&..
3B90:  18 66 8B C3 D1 E3 03 D8  D1 E3 8E 06 D0 0A 26 8B   .f...... ......&.
3BA0:  87 A4 DC 89 46 FE 8E 06  C6 0A 8B 5E EE D1 E3 D1   ....F... ...^....
3BB0:  E3 26 C7 87 3C 69 01 00  8E 06 CA 0A 8B 5E F2 D1   .&..<i.. .....^..
3BC0:  E3 D1 E3 26 C7 87 1A 66  01 00 B8 1A 00 F7 6E FE   ...&...f ......n.
3BD0:  8B D8 8E 06 D0 0A 26 8B  87 60 8B 8B C8 B8 1A 00   ......&. .`......
3BE0:  F7 6E FA 8B D8 8E 06 D2  0A 26 2B 8F 16 02 51 9A   .n...... .&+...Q.
3BF0:  EA 29 E5 0A 83 C4 02 99  8E 06 D4 0A 26 01 06 1A   .)...... ....&...
3C00:  F7 26 11 16 1C F7 B8 1A  00 F7 6E FE 8B D8 8E 06   .&...... ..n.....
3C10:  D0 0A 26 8B 87 62 8B 8B  C8 B8 1A 00 F7 6E FA 8B   ..&..b.. .....n..
3C20:  D8 8E 06 D2 0A 26 2B 8F  18 02 51 9A EA 29 E5 0A   .....&+. ..Q..)..
3C30:  83 C4 02 99 8E 06 D6 0A  26 01 06 50 F7 26 11 16   ........ &..P.&..
3C40:  52 F7 E9 AF FA 5E 5F 8B  E5 5D CB 55 8B EC 81 EC   R....^_. .].U....
3C50:  24 00 57 56 B8 00 00 8E  06 D8 0A 26 A3 28 00 8E   $.WV.... ...&.(..
3C60:  06 DA 0A 26 A3 F6 87 B8  00 00 8E 06 DC 0A 26 A3   ...&.... ......&.
3C70:  7C 89 26 A3 7A 89 B8 00  00 BA 00 00 8E 06 D6 0A   |.&.z... ........
```

```
3C80:  26 A3 50 F7 26 89 16 52  F7 8E 06 D4 0A 26 A3 1A   &.P.&..R .....&..
3C90:  F7 26 89 16 1C F7 C7 46  FA 02 00 C7 46 F8 03 00   .&.....F ....F...
3CA0:  8D 46 F4 16 50 8D 4E F6  16 51 9A B5 05 20 0A 83   .F..P.N. .Q... ..
3CB0:  C4 08 8B 46 F6 99 F7 7E  FA 89 46 F2 8B 46 F4 99   ...F.... ..F..F..
3CC0:  F7 7E F8 89 46 F0 C7 46  EA 00 00 C7 46 EC 00 00   ....F..F ....F...
3CD0:  8B 46 F2 89 46 E2 8B 46  F0 89 46 E4 C7 46 E0 00   .F..F..F ..F..F..
3CE0:  00 C7 46 E8 01 00 E9 03  00 FF 46 E8 83 7E E8 02   ..F..... ..F.....
3CF0:  7E 03 E9 34 01 C7 46 E6  01 00 E9 03 00 FF 46 E6   ...4..F. ......F.
3D00:  83 7E E6 03 7E 03 E9 06  01 B8 00 00 50 FF 76 E4   ........ ....P.v.
3D10:  FF 76 E2 FF 76 EC FF 76  EA B8 18 66 B9 9E 0D 51   .v..v..v ...f...Q
3D20:  50 8E 06 D0 0A 26 A1 AC  89 48 50 B8 A0 DC 06 50   P....&.. .HP....P
3D30:  B8 60 8B 06 50 9A A1 08  7C 02 83 C4 18 89 46 DC   .`..P... |.....F.
3D40:  8E 06 D2 0A 26 83 3E 6E  00 01 1B C0 40 89 46 DE   ....&.>n ....@.F.
3D50:  FF 76 DE FF 76 E4 FF 76  E2 FF 76 EC FF 76 EA B8   .v..v..v ..v..v..
3D60:  3A 69 B9 9E 0D 51 50 8E  06 D2 0A 26 A1 62 00 48   :i...QP. ...&.b.H
3D70:  50 B8 56 53 06 50 B8 16  02 06 50 9A A1 08 7C 02   P.VS.P.. ..P...|.
3D80:  83 C4 18 89 46 FC 8D 46  EE 16 50 8D 4E FE 16 51   ....F..F ..P.N..Q
3D90:  FF 76 FC FF 76 DC 9A 14  0D 7C 02 83 C4 0C 8B 46   .v..v... .|.....F
3DA0:  FE 8E 06 DE 0A 8B 5E E0  D1 E3 26 89 87 5A F7 8B   ......^. ..&..Z..
3DB0:  46 FC 8E 06 E0 0A 8B 5E  E0 D1 E3 26 89 87 1C 00   F......^ ...&....
3DC0:  8B 46 DC 8E 06 E2 0A 8B  5E E0 D1 E3 26 89 87 04   .F...... ^...&...
3DD0:  00 FF 46 E0 8B 46 F0 01  46 EC 8B 46 F0 01 46 E4   ..F..F.. F..F..F.
3DE0:  8B 46 FE 8E 06 DC 0A 26  01 06 7C 89 8B 46 EE 26   .F.....& ..|..F.&
3DF0:  01 06 7A 89 8B 46 FC 8E  06 D8 0A 26 01 06 28 00   ..z..F.. ...&..(.
3E00:  8B 46 DC 8E 06 DA 0A 26  01 06 F6 87 E9 EE FE C7   .F.....& ........
3E10:  46 EC 00 00 8B 46 F0 89  46 E4 8B 46 F2 01 46 EA   F....F.. F..F..F.
3E20:  8B 46 F2 01 46 E2 E9 C0  FE 5E 5F 8B E5 5D CB 00   .F..F... .^_..]..
3E30:  55 8B EC 81 EC 02 00 57  56 C7 46 FE 00 00 E9 03   U......W V.F.....
3E40:  00 FF 46 FE 83 7E FE 03  7C 03 E9 10 00 8B 5E FE   ..F..... |.....^.
3E50:  D1 E3 C4 76 0A 26 C7 00  18 FC E9 E4 FF C7 46 FE   ...v.&.. ......F.
3E60:  00 00 E9 03 00 FF 46 FE  83 7E FE 03 7C 03 E9 EA   ......F. ....|...
3E70:  00 C4 5E 0A 26 81 3F 18  FC 74 03 E9 59 00 C4 5E   ..^.&.?. .t..Y..^
3E80:  06 26 8B 47 08 C4 5E 06  26 3B 47 0E 7C 03 E9 04   .&.G..^. &;G.|...
3E90:  00 26 8B 47 0E C4 5E 06  26 3B 47 02 7C 03 E9 04   .&.G..^. &;G.|...
3EA0:  00 26 8B 47 02 8B 76 FE  8B CE D1 E6 03 F1 D1 E6   .&.G..v. ........
3EB0:  C4 5E 06 26 3B 40 02 74  03 E9 1B 00 8B 76 FE 8B   .^.&;@.t .....v..
3EC0:  C6 D1 E6 03 F0 D1 E6 C4  5E 06 26 8B 40 02 C4 5E   ........ ^.&.@..^
3ED0:  0A 26 89 07 E9 81 00 C4  5E 0A 26 81 7F 04 18 FC   .&...... ^.&.....
3EE0:  74 03 E9 5A 00 C4 5E 06  26 8B 47 08 C4 5E 06 26   t..Z..^. &.G..^.&
3EF0:  3B 47 0E 7F 03 E9 04 00  26 8B 47 0E C4 5E 06 26   ;G...... &.G..^.&
3F00:  3B 47 02 7F 03 E9 04 00  26 8B 47 02 8B 76 FE 8B   ;G...... &.G..v..
3F10:  CE D1 E6 03 F1 D1 E6 C4  5E 06 26 3B 40 02 74 03   ........ ^.&;@.t.
3F20:  E9 1C 00 8B 76 FE 8B C6  D1 E6 03 F0 D1 E6 C4 5E   ....v... .......^
3F30:  06 26 8B 40 02 C4 5E 0A  26 89 47 04 E9 19 00 8B   .&.@..^. &.G.....
3F40:  76 FE 8B C6 D1 E6 03 F0  D1 E6 C4 5E 06 26 8B 40   v....... ...^.&.@
3F50:  02 C4 5E 0A 26 89 47 02  E9 0A FF 5E 5F 8B E5 5D   ..^.&.G. ...^_..]
3F60:  CB 55 8B EC 81 EC 04 00  57 56 C7 46 FE 00 00 C7   .U...... WV.F....
3F70:  46 FC 00 00 E9 03 00 FF  46 FC 83 7E FC 03 7C 03   F....... F.....|.
3F80:  E9 5E 00 8B 5E FC D1 E3  C4 76 0A 26 8B 00 8B 5E   .^..^... .v.&...^
3F90:  FC D1 E3 C4 76 06 26 2B  00 F7 D8 50 9A EA 29 E5   ....v.&+ ...P..).
3FA0:  0A 83 C4 02 3D 24 00 7F  03 E9 06 00 B8 00 00 E9   ....=$.. ........
3FB0:  44 00 8B 5E FC D1 E3 C4  76 0A 26 8B 00 8B 5E FC   D..^.... v.&...^.
3FC0:  D1 E3 C4 76 06 26 2B 00  F7 D8 50 9A EA 29 E5 0A   ...v.&+. ..P..)..
3FD0:  83 C4 02 3D 12 00 7F 03  E9 03 00 FF 46 FE E9 96   ...=.... ....F...
```

```
3FE0:  FF 83 7E FE 01 7F 03 E9  06 00 B8 00 00 E9 06 00   ..~..... ........
3FF0:  B8 01 00 E9 00 00 5E 5F  8B E5 5D CB 55 8B EC 81   ......^_ ..].U...
4000:  EC 06 00 57 56 C7 46 FA  00 00 8B 46 0C 89 46 FC   ...WV.F. ...F..F.
4010:  8B 46 FA 39 46 FC 7E 03  E9 06 00 8B 46 FA E9 5A   .F.9F.~. ....F..Z
4020:  00 8B 46 FC 03 46 FA D1  F8 89 46 FE 8B 5E FE 8B   ..F..F.. ..F..^..
4030:  C3 D1 E3 03 D8 D1 E3 C4  76 06 8B 46 0A 26 39 00   ........ v..F.&9.
4040:  7C 03 E9 0A 00 8B 46 FE  40 89 46 FA E9 C1 FF 8B   |.....F. @.F.....
4050:  5E FE 8B C3 D1 E3 03 D8  D1 E3 C4 76 06 8B 46 0A   ^....... ...v..F.
4060:  26 39 00 7F 03 E9 0A 00  8B 46 FE 48 89 46 FC E9   &9...... .F.H.F..
4070:  9E FF 8B 46 FE E9 03 00  E9 95 FF 5E 5F 8B E5 5D   ...F.... ...^_..]
4080:  CB 00 55 8B EC 81 EC 22  00 57 56 8D 46 EE 16 50   ..U...." .WV.F..P
4090:  8D 4E F4 16 51 9A B5 05  20 0A 83 C4 08 8B 46 F4   .N..Q...  .....F.
40A0:  B9 0A 00 99 F7 F9 A3 10  0C 8B 46 EE 99 F7 F9 A3   ........ ..F.....
40B0:  12 0C 8B 46 F4 D1 F8 A3  14 0C 8B 46 EE BB 03 00   ...F.... ...F....
40C0:  99 F7 FB A3 16 0C B8 0A  00 99 F7 3E 18 01 89 46   ........ ...>...F
40D0:  DE B8 1E 00 99 F7 3E 18  01 89 46 E2 8E 06 E4 0A   ......>. ..F.....
40E0:  26 C7 06 62 89 00 00 B8  00 00 8E 06 E6 0A 26 A3   &..b.... ......&.
40F0:  16 66 8E 06 E8 0A 26 A3  EC EF B8 00 00 8E 06 E4   .f....&. ........
4100:  0A 26 A3 54 89 26 A3 5C  89 26 C7 06 60 89 00 00   .&.T.&.\ .&..`...
4110:  26 C7 06 5E 89 64 00 B8  64 00 26 A3 58 89 26 A3   &..^.d.. d.&.X.&.
4120:  56 89 A1 10 0C D1 F8 8E  06 EA 0A 26 A3 60 EF A1   V....... ...&.`..
4130:  12 0C D1 F8 8E 06 EC 0A  26 A3 EA EF A1 14 0C 8E   ........ &.......
4140:  06 EE 0A 26 A3 5C 00 A1  16 0C 8E 06 F0 0A 26 A3   ...&.\.. ......&.
4150:  5E 00 9A 1B 0F E8 03 8D  46 F0 16 50 8D 46 F6 16   ^....... F..P.F..
4160:  50 8D 46 E8 16 50 8D 46  EA 16 50 9A E8 00 7C 02   P.F..P.F ..P...|.
4170:  83 C4 10 8E 06 E4 0A 26  A3 52 89 9A 5C 03 E8 03   .......& .R..\...
4180:  8E 06 E4 0A 26 83 3E 5A  89 00 74 03 E9 05 00 26   ....&.>Z ..t....&
4190:  FF 06 5A 89 8E 06 F2 0A  26 A1 CA 89 8E 06 F4 0A   ..Z..... &.......
41A0:  26 2B 06 80 00 89 46 FA  8E 06 F2 0A 26 A1 CC 89   &+....F. ....&...
41B0:  8E 06 F4 0A 26 2B 06 82  00 89 46 F8 8E 06 E4 0A   ....&+.. ..F.....
41C0:  26 83 3E 5A 89 03 7F 03  E9 CB 00 B8 05 00 50 B8   &.>Z.... ......P.
41D0:  1E 0C 1E 50 B8 50 00 50  B8 A0 00 50 B8 12 88 B9   ...P.P.P ...P....
41E0:  9E 0D 51 50 9A E7 0D E8  03 83 C4 0E A3 18 0C FF   ..QP.... ........
41F0:  36 12 0C FF 36 10 0C B8  00 00 50 50 B8 1C 0C 1E   6...6... ..PP....
4200:  50 B9 1A 0C 1E 51 FF 76  DE BA 00 00 BB 19 1D 53   P....Q.v .......S
4210:  52 9A E7 21 E8 03 83 C4  16 8E 06 E4 0A 26 A3 5C   R..!.... .....&.\
4220:  89 26 A1 5C 89 89 46 E6  8B 46 FA 2B 06 1A 0C 50   .&.\..F. .F.+...P
4230:  9A EA 29 E5 0A 83 C4 02  3D 14 00 7C 03 E9 56 00   ..)..... =..|..V.
4240:  8B 46 F8 2B 06 1C 0C 50  9A EA 29 E5 0A 83 C4 02   .F.+...P ..).....
4250:  3D 14 00 7C 03 E9 3E 00  A1 1A 0C 2B 46 FA 99 52   =..|..>. ...+F..R
4260:  50 52 50 9A FA 2A E5 0A  8B C8 A1 1C 0C 2B 46 F8   PRP..*.. .....+F.
4270:  8B DA 99 52 50 52 50 8B  F1 8B FB 9A FA 2A E5 0A   ...RPRP. .....*..
4280:  03 F0 13 FA 57 56 9A 3A  01 42 08 83 C4 04 8E 06   ....WV.: .B......
4290:  E4 0A 26 A3 56 89 8E 06  E4 0A 26 FF 36 5C 89 9A   ..&.V... ..&.6\..
42A0:  99 01 85 06 83 C4 02 3D  00 00 75 03 E9 24 00 8D   .......= ..u..$..
42B0:  46 E0 16 50 8D 46 E4 16  50 8D 46 FC 16 50 8D 46   F..P.F.. P.F..P.F
42C0:  FE 16 50 9A 5A 0F E8 03  83 C4 10 8E 06 E4 0A 26   ..P.Z... .......&
42D0:  A3 62 89 8E 06 E4 0A 26  83 3E 62 89 00 7F 03 E9   .b.....& .>b.....
42E0:  14 00 FF 76 E0 FF 76 E4  FF 76 FC FF 76 FE 9A 26   ...v..v. .v..v..&
42F0:  16 E8 03 83 C4 08 8E 06  E4 0A 26 83 3E 52 89 01   ........ ..&.>R..
4300:  7F 03 E9 A7 00 26 83 3E  62 89 00 7F 03 E9 9C 00   .....&.> b.......
4310:  B8 1A 00 F7 6E F6 8B D8  8E 06 F2 0A 26 8B 87 60   ....n... ....&..`
4320:  8B 8B C8 B8 1A 00 F7 6E  EA 8B D8 8E 06 F4 0A 26   .......n .......&
4330:  2B 8F 16 02 89 4E F2 B8  1A 00 F7 6E F6 8B D8 8E   +....N.. ...n....
```

```
4340:  06 F2 0A 26 8B 87 62 8B  8B C8 B8 1A 00 F7 6E EA   ...&..b. ......n.
4350:  8B D8 8E 06 F4 0A 26 2B  8F 18 02 89 4E EC A1 1A   ......&+ ....N...
4360:  0C 2B 46 F2 99 52 50 52  50 9A FA 2A E5 0A 8B C8   .+F..RPR P..*....
4370:  A1 1C 0C 2B 46 EC 8B DA  99 52 50 52 50 8B F1 8B   ...+F... .RPRP...
4380:  FB 9A FA 2A E5 0A 03 F0  13 FA 57 56 9A 3A 01 42   ...*.... ..WV.:.B
4390:  08 83 C4 04 8E 06 E4 0A  26 A3 58 89 26 83 3E 58   ........ &.X.&.>X
43A0:  89 14 7C 03 E9 05 00 26  FF 06 62 89 8E 06 E4 0A   ..|....& ..b.....
43B0:  26 83 3E 56 89 14 7C 03  E9 10 00 26 83 3E 62 89   &.>V..|. ...&.>b.
43C0:  00 7F 03 E9 05 00 26 FF  06 62 89 8E 06 E4 0A 26   ......&. .b.....&
43D0:  A1 62 89 E9 00 00 5E 5F  8B E5 5D CB 55 8B EC 81   .b....^_ ..].U...
43E0:  EC 34 00 57 56 C7 46 F2  01 00 8E 06 E4 0A 26 C7   .4.WV.F. ......&.
43F0:  06 5A 89 00 00 26 C7 06  54 89 00 00 C7 46 D2 00   .Z...&.. T....F..
4400:  00 E9 03 00 FF 46 D2 8E  06 F4 0A 8B 46 D2 26 39   .....F.. ....F.&9
4410:  06 60 00 7F 03 E9 49 0A  8B 5E D2 D1 E3 26 8B 87   .`....I. .^...&..
4420:  86 00 89 46 E6 83 7E E6  FF 75 03 E9 30 0A FF 76   ...F..~. .u..0..v
4430:  E6 B8 16 02 B9 9E 0D 51  50 9A 08 00 73 08 83 C4   .......Q P...s...
4440:  06 89 46 E6 83 7E E6 FF  75 03 E9 0E 0A B8 1A 00   ..F..~.. u.......
4450:  F7 6E E6 8B D8 8E 06 F4  0A 26 8B 87 20 02 89 46   .n...... .&.. ..F
4460:  EC B8 1A 00 F7 6E E6 8B  D8 26 8B 87 24 02 89 46   .....n.. .&..$..F
4470:  E0 83 7E E0 1E 7E 03 E9  03 00 E9 A8 FF 8E 06 F6   ..~..~.. ........
4480:  0A 26 83 3E 82 01 00 75  03 E9 3C 00 8E 06 E4 0A   .&.>...u ..<.....
4490:  26 83 3E 82 89 00 74 03  E9 2D 00 B8 1A 00 F7 6E   &.>...t. .-.....n
44A0:  EC 8B D8 8E 06 F4 0A 26  F6 87 2E 02 80 75 03 E9   .......& .....u..
44B0:  13 00 B8 1A 00 F7 6E E6  8B D8 26 F6 87 2E 02 80   ......n. ..&.....
44C0:  74 03 E9 03 00 E9 5D FF  B8 1A 00 F7 6E EC 8B D8   t.....]. ....n...
44D0:  8E 06 F4 0A 8B 46 E6 26  39 87 20 02 74 03 E9 06   .....F.& 9. .t...
44E0:  00 B8 01 00 E9 22 00 B8  1A 00 F7 6E EC 8B D8 8E   .....".. ...n....
44F0:  06 F4 0A 8B 46 E6 26 39  87 1A 02 74 03 E9 06 00   ....F.&9 ...t....
4500:  B8 00 00 E9 03 00 B8 02  00 89 46 E4 83 7E F2 00   ........ ..F..~..
4510:  75 03 E9 1B 01 B8 00 00  89 46 DE 89 46 DC B8 1A   u....... .F..F...
4520:  00 F7 6E EC 8B D8 8E 06  F4 0A 26 F6 87 2E 02 01   ..n..... ..&.....
4530:  74 03 E9 18 00 B8 1A 00  F7 6E E6 8B D8 26 F6 87   t....... .n...&..
4540:  2E 02 01 74 03 E9 05 00  C7 46 DC 01 00 B8 1A 00   ...t.... .F......
4550:  F7 6E E6 8B D8 8E 06 F4  0A B8 1A 00 F7 6E EC 8B   .n...... .....n..
4560:  F0 26 8B 84 18 02 26 2B  87 18 02 99 52 50 52 50   .&....&+ ....RPRP
4570:  9A FA 2A E5 0A 8B C8 B8  1A 00 8B DA F7 6E E6 8B   ..*..... .....n..
4580:  F0 8E 06 F4 0A B8 1A 00  F7 6E EC 8B F8 26 8B 85   ........ .n...&..
4590:  16 02 26 2B 84 16 02 99  52 50 52 50 8B F1 8B FB   ..&+.... RPRP....
45A0:  9A FA 2A E5 0A 03 F0 13  FA 57 56 9A 3A 01 42 08   ..*..... .WV.:.B.
45B0:  83 C4 04 89 46 FE 83 7E  DC 00 74 03 E9 71 00 B8   ....F..~ ..t..q..
45C0:  1A 00 8E 06 E6 0A 26 F7  2E 16 66 8B D8 8E 06 F8   ......&. ..f.....
45D0:  0A 8B 46 EC 26 89 87 A2  72 B8 1A 00 8E 06 E6 0A   ..F.&... r.......
45E0:  26 F7 2E 16 66 8B D8 8E  06 F8 0A 8B 46 E6 26 89   &...f... ....F.&.
45F0:  87 A4 72 B8 1A 00 8E 06  E6 0A 26 F7 2E 16 66 8B   ..r..... ..&...f.
4600:  D8 8E 06 F8 0A 8B 46 E4  26 89 87 A8 72 8E 06 E6   ......F. &...r...
4610:  0A 26 FF 06 16 66 26 81  3E 16 66 C8 00 7D 03 E9   .&...f&. >.f..}..
4620:  05 00 C7 46 F2 00 00 8E  06 E8 0A 26 FF 06 EC EF   ...F.... ...&....
4630:  C7 46 D8 00 00 E9 03 00  FF 46 D8 8E 06 F2 0A 8B   .F...... .F......
4640:  46 D8 26 39 06 AC 89 7F  03 E9 DB 07 8B 5E D8 8B   F.&9.... .....^..
4650:  C3 D1 E3 03 D8 D1 E3 26  8B 87 A4 DC 89 46 FA B8   .......& .....F..
4660:  1A 00 F7 6E FA 8B D8 26  8B 87 60 8B 8B C8 B8 1A   ...n...& ..`.....
4670:  00 F7 6E EC 8B D8 8E 06  F4 0A 26 2B 8F 16 02 89   ..n..... ..&+....
4680:  4E EE 8E 06 EE 0A 26 A1  5C 00 F7 D8 3B 46 EE 7D   N.....&. \...;F.}
4690:  03 E9 03 00 E9 A1 FF 8E  06 EE 0A 8B 46 EE 26 39   ........ ....F.&9
```

```
46A0:  06 5C 00 7E 03 E9 03 00  E9 7C 07 B8 1A 00 F7 6E   .\.~.... .|.....n
46B0:  FA 8B D8 8E 06 F2 0A 26  8B 87 62 8B 8B C8 B8 1A   .......& ..b.....
46C0:  00 F7 6E EC 8B D8 8E 06  F4 0A 26 2B 8F 18 02 89   ..n..... ..&+....
46D0:  4E E8 FF 76 E8 9A EA 29  E5 0A 83 C4 02 8E 06 F0   N..v...) ........
46E0:  0A 26 3B 06 5E 00 7D 03  E9 03 00 E9 4A FF C7 46   .&;.^.}. ....J..F
46F0:  D0 01 00 C7 46 F8 00 00  C7 46 D6 00 00 C7 46 D4   ....F... .F....F.
4700:  00 00 E9 03 00 FF 46 D4  83 7E D4 03 7C 03 E9 13   ......F. .~..|...
4710:  07 B8 1A 00 F7 6E FA 8B  D8 8B 46 D4 8B C8 D1 E0   .....n.. ..F.....
4720:  03 C1 D1 E0 03 D8 8E 06  F2 0A 26 8B 87 64 8B 89   ........ ..&..d..
4730:  46 F4 83 7E F4 FF 74 03  E9 03 00 E9 C7 FF B8 1A   F..~..t. ........
4740:  00 F7 6E F4 8B D8 8E 06  F2 0A 26 8B 87 60 8B 8B   ..n..... ..&..`..
4750:  C8 B8 1A 00 F7 6E E6 8B  D8 8E 06 F4 0A 26 2B 8F   .....n.. .....&+.
4760:  16 02 89 4E EA FF 76 EA  9A EA 29 E5 0A 83 C4 02   ...N..v. ..).....
4770:  8E 06 EE 0A 26 3B 06 5C  00 7D 03 E9 03 00 E9 84   ....&;.\ .}......
4780:  FF B8 1A 00 F7 6E F4 8B  D8 8E 06 F2 0A 26 8B 87   .....n.. .....&..
4790:  62 8B 8B C8 B8 1A 00 F7  6E E6 8B D8 8E 06 F4 0A   b....... n.......
47A0:  26 2B 8F 18 02 89 4E E2  FF 76 E2 9A EA 29 E5 0A   &+....N. .v...)..
47B0:  83 C4 02 8E 06 F0 0A 26  3B 06 5E 00 7D 03 E9 03   .......& ;.^.}...
47C0:  00 E9 41 FF B8 1A 00 F7  6E FA 8B D8 8B 46 D4 8B   ..A..... n....F..
47D0:  C8 D1 E0 03 C1 D1 E0 03  D8 8E 06 F2 0A 26 83 BF   ........ .....&..
47E0:  68 8B 1E 7C 03 E9 06 00  B8 01 00 E9 03 00 B8 00   h..|.... ........
47F0:  00 50 9A EA 29 E5 0A 83  C4 02 3D 00 00 75 03 E9   .P..)... ..=..u..
4800:  03 00 E9 00 FF C7 46 F8  00 00 B8 1A 00 F7 6E F4   ......F. ......n.
4810:  8B D8 8E 06 F2 0A B8 1A  00 F7 6E FA 8B F0 26 8B   ........ ..n...&.
4820:  84 60 8B 26 2B 87 60 8B  99 52 50 52 50 9A FA 2A   .`.&+.`. .RPRP..*
4830:  E5 0A 8B C8 B8 1A 00 8B  DA F7 6E F4 8B F0 8E 06   ........ ..n.....
4840:  F2 0A B8 1A 00 F7 6E FA  8B F8 26 8B 85 62 8B 26   ......n. ..&..b.&
4850:  2B 84 62 8B 99 52 50 52  50 8B F1 8B FB 9A FA 2A   +.b..RPR P......*
4860:  E5 0A 03 F0 13 FA 57 56  9A 3A 01 42 08 83 C4 04   ......WV .:.B....
4870:  89 46 CE 8B 46 CE 2B 46  FE 50 9A EA 29 E5 0A 83   .F..F.+F .P..)...
4880:  C4 02 89 46 CC B8 14 00  F7 6E FE B9 64 00 99 F7   ...F.... .n..d...
4890:  F9 3B 46 CC 7C 03 E9 2F  00 B8 1A 00 F7 6E EC 8B   .;F.|../ .....n..
48A0:  D8 8E 06 F4 0A 26 F6 87  2E 02 01 75 03 E9 18 00   .....&.. ...u....
48B0:  B8 1A 00 F7 6E E6 8B D8  26 F6 87 2E 02 01 75 03   ....n... &.....u.
48C0:  E9 05 00 C7 46 D0 00 00  B8 1A 00 F7 6E FA 8B D8   ....F... ....n...
48D0:  8B 46 D4 8B C8 D1 E0 03  C1 D1 E0 03 D8 8E 06 F2   .F...... ........
48E0:  0A 26 8B 87 68 8B 2B 46  E0 50 9A EA 29 E5 0A 83   .&..h.+F .P..)...
48F0:  C4 02 8B 4E EE 2B 4E EA  51 8B F0 9A EA 29 E5 0A   ...N.+N. Q....)..
4900:  83 C4 02 8B 4E E8 2B 4E  E2 51 8B F8 9A EA 29 E5   ....N.+N .Q....).
4910:  0A 83 C4 02 03 F8 03 F7  83 FE 3C 7F 03 E9 03 00   ........ ..<.....
4920:  E9 E2 FD B8 1A 00 F7 6E  F4 8B D8 8E 06 F2 0A 8B   .......n ........
4930:  46 FA 26 39 87 6A 8B 74  03 E9 06 00 B8 01 00 E9   F.&9.j.t ........
4940:  22 00 B8 1A 00 F7 6E F4  8B D8 8E 06 F2 0A 8B 46   ".....n. .......F
4950:  FA 26 39 87 64 8B 74 03  E9 06 00 B8 00 00 E9 03   .&9.d.t. ........
4960:  00 B8 02 00 89 46 F0 B8  1A 00 F7 6E F4 8B 5E F0   .....F.. ...n..^.
4970:  8B CB D1 E3 03 D9 D1 E3  03 D8 8E 06 F2 0A 26 8B   ........ ......&.
4980:  87 66 8B 8B C8 B8 1A 00  F7 6E E6 8B D8 8E 06 F4   .f...... .n......
4990:  0A 26 2B 8F 22 02 89 4E  F6 81 7E F6 B4 00 7F 03   .&+."..N ..~.....
49A0:  E9 08 00 81 6E F6 68 01  E9 12 00 81 7E F6 4C FF   ....n.h. ....~.L.
49B0:  7D 03 E9 03 00 E9 05 00  81 46 F6 68 01 B8 1A 00   }....... .F.h....
49C0:  F7 6E FA 8B D8 8B 46 D4  8B C8 D1 E0 03 C1 D1 E0   .n....F. ........
49D0:  03 D8 8E 06 F2 0A 26 8B  87 66 8B 8B C8 B8 1A 00   ......&. .f......
49E0:  F7 6E EC 8B 5E E4 8B D3  D1 E3 03 DA D1 E3 03 D8   .n..^... ........
49F0:  8E 06 F4 0A 26 2B 8F 1C  02 89 4E FC 81 7E FC B4   ....&+.. ..N..~..
```

```
4A00:  00 7F 03 E9 08 00 81 6E  FC 68 01 E9 12 00 81 7E   .......n .h.....~
4A10:  FC 4C FF 7D 03 E9 03 00  E9 05 00 81 46 FC 68 01   .L.}.... ....F.h.
4A20:  FF 76 FC 9A EA 29 E5 0A  83 C4 02 3D 12 00 7F 03   .v...).. ...=....
4A30:  E9 03 00 E9 CF FC FF 76  F6 9A EA 29 E5 0A 83 C4   .......v ...)....
4A40:  02 3D 12 00 7F 03 E9 05  00 C7 46 D0 00 00 B8 1A   .=...... ..F.....
4A50:  00 F7 6E E6 8B D8 8E 06  F4 0A 26 FF B7 18 02 B8   ..n..... ..&.....
4A60:  1A 00 F7 6E E6 8B D8 26  FF B7 16 02 B8 1A 00 F7   ...n...& ........
4A70:  6E EC 8B D8 26 FF B7 18  02 B8 1A 00 F7 6E EC 8B   n...&... .....n..
4A80:  D8 26 FF B7 16 02 B8 1A  00 F7 6E F4 8B D8 8E 06   .&...... ..n.....
4A90:  F2 0A 26 FF B7 62 8B B8  1A 00 F7 6E F4 8B D8 26   ..&..b.. ...n...&
4AA0:  FF B7 60 8B B8 1A 00 F7  6E FA 8B D8 26 FF B7 62   ..`..... n...&..b
4AB0:  8B B8 1A 00 F7 6E FA 8B  D8 26 FF B7 60 8B 9A 8A   .....n.. .&..`...
4AC0:  01 73 08 83 C4 10 89 46  DA FF 76 DA 9A EA 29 E5   .s.....F ..v...).
4AD0:  0A 83 C4 02 3D 12 00 7F  03 E9 03 00 E9 26 FC 8B   ....=... .....&..
4AE0:  46 F6 2B 46 FC 50 9A EA  29 E5 0A 83 C4 02 3D 12   F.+F.P.. ).....=.
4AF0:  00 7F 03 E9 05 00 C7 46  D0 00 00 B8 1A 00 F7 6E   .......F .......n
4B00:  EC 8B D8 8E 06 F4 0A 26  F6 87 2E 02 10 75 03 E9   .......& .....u..
4B10:  1B 00 B8 1A 00 F7 6E EC  8B D8 26 F6 87 2E 02 01   ......n. ..&.....
4B20:  75 03 E9 08 00 C7 46 F8  02 00 E9 05 00 C7 46 F8   u.....F. ......F.
4B30:  01 00 83 7E D0 00 74 03  E9 03 00 FF 4E F8 83 7E   ...~..t. ....N..~
4B40:  F8 00 7F 03 E9 77 00 8B  46 F8 8E 06 FA 0A 8B 5E   .....w.. F......^
4B50:  FC D1 E3 26 01 87 B2 88  8B 46 E8 99 F7 3E 18 01   ...&.... .F...>..
4B60:  8E 06 EC 0A 26 03 06 EA  EF 8B C8 D1 E0 D1 E0 03   ....&... ........
4B70:  C1 D1 E0 05 05 00 B9 0A  00 99 F7 F9 BB 3C 00 F7   ........ .....<..
4B80:  EB 8B D8 8B 46 EE 99 F7  3E 18 01 8E 06 EA 0A 26   ....F... >......&
4B90:  03 06 60 EF 8B D0 D1 E0  D1 E0 03 C2 D1 E0 05 05   ..`..... ........
4BA0:  00 99 F7 F9 03 D8 8E 06  FC 0A 8A 46 F8 26 00 87   ........ ...F.&..
4BB0:  00 00 8B 46 F8 8E 06 E4  0A 26 01 06 54 89 83 7E   ...F.... .&..T..~
4BC0:  D0 00 75 03 E9 A2 00 B8  1A 00 F7 6E E6 8B D8 8E   ..u..... ...n....
4BD0:  06 F4 0A 26 F6 87 2E 02  10 75 03 E9 1B 00 B8 1A   ...&.... .u......
4BE0:  00 F7 6E E6 8B D8 26 F6  87 2E 02 01 75 03 E9 08   ..n...&. ....u...
4BF0:  00 C7 46 F8 02 00 E9 05  00 C7 46 F8 01 00 83 7E   ..F..... ..F....~
4C00:  DE 00 74 03 E9 0E 00 8E  06 E4 0A 26 FF 06 5A 89   ..t..... ...&..Z.
4C10:  C7 46 DE 01 00 8B 46 F8  8E 06 FA 0A 8B 5E F6 D1   .F....F. .....^..
4C20:  E3 26 01 87 B2 88 8B 46  E2 99 F7 3E 18 01 8E 06   .&.....F ...>....
4C30:  EC 0A 26 03 06 EA EF B9  3C 00 F7 E9 8B D8 8B 46   ..&..... <......F
4C40:  EA 99 F7 3E 18 01 03 D8  8E 06 EA 0A 26 03 1E 60   ...>.... ....&..`
4C50:  EF 8E 06 FC 0A 8A 46 F8  26 00 87 00 00 8B 46 F8   ......F. &.....F.
4C60:  8E 06 E4 0A 26 01 06 54  89 83 7E F2 00 75 03 E9   ....&..T ..~..u..
4C70:  AF 01 83 7E D0 00 75 03  E9 A6 01 83 7E DC 00 74   ...~..u. ....~..t
4C80:  03 E9 9D 01 B8 1A 00 8E  06 E6 0A 26 F7 2E 16 66   ........ ...&...f
4C90:  8B D8 8E 06 F8 0A 8B 46  FA 26 89 87 A2 72 B8 1A   .......F .&...r..
4CA0:  00 8E 06 E6 0A 26 F7 2E  16 66 8B D8 8E 06 F8 0A   .....&.. .f......
4CB0:  8B 46 F4 26 89 87 A4 72  B8 1A 00 8E 06 E6 0A 26   .F.&...r .......&
4CC0:  F7 2E 16 66 8B D8 8E 06  F8 0A 8B 46 DA 26 89 87   ...f.... ...F.&..
4CD0:  B6 72 B8 1A 00 8E 06 E6  0A 26 F7 2E 16 66 8B D8   .r...... .&...f..
4CE0:  8E 06 F8 0A 8B 46 EE 26  89 87 AA 72 B8 1A 00 8E   .....F.& ...r....
4CF0:  06 E6 0A 26 F7 2E 16 66  8B D8 8E 06 F8 0A 8B 46   ...&...f .......F
4D00:  EA 26 89 87 AC 72 B8 1A  00 8E 06 E6 0A 26 F7 2E   .&...r.. .....&..
4D10:  16 66 8B D8 8E 06 F8 0A  8B 46 E8 26 89 87 AE 72   .f...... .F.&...r
4D20:  B8 1A 00 8E 06 E6 0A 26  F7 2E 16 66 8B D8 8E 06   .......& ...f....
4D30:  F8 0A 8B 46 CE 26 89 87  BA 72 B8 1A 00 8E 06 E6   ...F.&.. .r......
4D40:  0A 26 F7 2E 16 66 8B D8  8E 06 F8 0A 8B 46 CC 26   .&...f.. .....F.&
4D50:  89 87 B8 72 B8 1A 00 8E  06 E6 0A 26 F7 2E 16 66   ...r.... ...&...f
```

```
4D60: 8B D8 8E 06 F8 0A 8B 46  E2 26 89 87 B0 72 B8 1A   .......F .&...r..
4D70: 00 8E 06 E6 0A 26 F7 2E  16 66 8B D8 8E 06 F8 0A   .....&.. .f......
4D80: 8B 46 FC 26 89 87 B2 72  B8 1A 00 8E 06 E6 0A 26   .F.&...r .......&
4D90: F7 2E 16 66 8B D8 8E 06  F8 0A 8B 46 F6 26 89 87   ...f.... ...F.&..
4DA0: B4 72 83 7E F0 01 74 03  E9 29 00 B8 1A 00 8E 06   .r.~..t. .)......
4DB0: E6 0A 26 F7 2E 16 66 8B  D8 8E 06 F8 0A B8 FF FF   ..&...f. ........
4DC0: 2B 46 D4 26 89 87 A8 72  8E 06 E6 0A 26 FF 06 16   +F.&...r ....&...
4DD0: 66 E9 23 00 B8 1A 00 8E  06 E6 0A 26 F7 2E 16 66   f.#..... ...&...f
4DE0: 8B D8 8E 06 F8 0A 8B 46  F0 26 89 87 A8 72 8E 06   .......F .&...r..
4DF0: E6 0A 26 FF 06 16 66 8E  06 E6 0A 26 81 3E 16 66   ..&...f. ...&.>.f
4E00: C8 00 7D 03 E9 1A 00 C7  46 F2 00 00 B8 1A 00 26   ..}..... F......&
4E10: F7 2E 16 66 8B D8 8E 06  F8 0A 26 C7 87 A2 72 FF   ...f.... ..&...r.
4E20: FF E9 E1 F8 E9 11 F8 83  7E F2 00 75 03 E9 2B 00   ........ ~..u..+.
4E30: 83 7E DC 00 74 03 E9 22  00 B8 1A 00 8E 06 E6 0A   .~..t.." ........
4E40: 26 F7 2E 16 66 8B D8 8E  06 F8 0A 26 C7 87 A2 72   &...f... ...&...r
4E50: FF FF 8E 06 E6 0A 26 FF  06 16 66 E9 C7 F5 E9 A3   ......&. ..f.....
4E60: F5 5E 5F 8B E5 5D CB 55  8B EC 81 EC 12 00 57 56   .^_..].U ......WV
4E70: C4 5E 0E 26 C7 07 00 00  C7 46 F8 00 00 8B 46 0A   .^.&.... .F....F.
4E80: D1 F8 89 46 FC 8B 46 12  D1 E0 89 46 F6 8B 46 FC   ...F..F. ...F..F.
4E90: 2B 46 12 2B 46 0C 3D 00  00 7C 03 E9 03 00 B8 00   +F.+F.=. .|......
4EA0: 00 89 46 F2 8B 46 F6 03  46 F2 3B 46 0A 7F 03 E9   ..F..F.. F.;F....
4EB0: 03 00 8B 46 0A 89 46 FA  8B 46 F2 89 46 EE E9 03   ...F..F. .F..F...
4EC0: 00 FF 46 EE 8B 46 EE 39  46 FA 7F 03 E9 11 00 8B   ..F..F.9 F.......
4ED0: 5E EE D1 E3 C4 76 06 26  8B 00 01 46 F8 E9 E1 FF   ^....v.& ...F....
4EE0: 8B 46 12 01 46 F2 8B 46  FC 03 46 0C 8B 4E 0A 2B   .F..F..F ..F..N.+
4EF0: 4E 12 3B C1 7F 03 E9 02  00 8B C1 89 46 FA 8B 46   N.;..... ....F..F
4F00: F2 89 46 F0 E9 03 00 FF  46 F0 8B 46 F0 39 46 FA   ..F..... F..F.9F.
4F10: 7F 03 E9 74 00 8B 5E F0  2B 5E 12 D1 E3 C4 76 06   ...t..^. +^....v.
4F20: 26 8B 00 8B 5E F0 03 5E  12 D1 E3 C4 76 06 26 2B   &...^..^ ....v.&+
4F30: 00 F7 D8 01 46 F8 C4 5E  0E 8B 46 F8 26 39 07 7C   ....F..^ ..F.&9.|
4F40: 03 E9 15 00 8B 46 F8 C4  5E 0E 26 89 07 8B 46 F0   .....F.. ^.&...F.
4F50: 89 46 FE 89 46 F4 E9 2D  00 C4 5E 0E 8B 46 F8 26   .F..F..- ..^..F.&
4F60: 39 07 74 03 E9 1A 00 83  7E F4 00 75 03 E9 11 00   9.t..... ~..u....
4F70: 8B 46 F4 03 46 F0 99 2B  C2 D1 F8 89 46 FE E9 05   .F..F..+ ....F...
4F80: 00 C7 46 F4 00 00 E9 7E  FF 8B 46 FC 29 46 FE 8B   ..F....~ ..F.)F..
4F90: 46 FE E9 00 00 5E 5F 8B  E5 5D CB 55 8B EC 81 EC   F....^_. .].U....
4FA0: 00 00 57 56 B8 10 0E 50  B8 00 00 50 B9 00 00 BA   ..WV...P ...P....
4FB0: 19 1D 52 51 9A 3E 29 E5  0A 83 C4 08 B8 40 01 50   ..RQ.>). .....@.P
4FC0: B8 00 00 50 B8 12 88 B9  9E 0D 51 50 9A 3E 29 E5   ...P.... ..QP.>).
4FD0: 0A 83 C4 08 5E 5F 8B E5  5D CB 55 8B EC 81 EC 5E   ....^_.. ].U....^
4FE0: 00 57 56 C7 46 D8 00 00  C7 46 FC AC 0D C7 46 D6   .WV.F... .F....F.
4FF0: 32 00 8B 46 D6 99 89 46  AC 89 56 AE C7 46 B4 14   2..F...F ..V..F..
5000: 00 B8 FF FF 89 46 A4 89  46 B2 B8 00 00 BA 00 00   .....F.. F.......
5010: 89 46 D0 89 56 D2 89 46  CC 89 56 CE 89 46 C2 89   .F..V..F ..V..F..
5020: 56 C4 89 46 BE 89 56 C0  C7 46 BA 01 00 E9 03 00   V..F..V. .F......
5030: FF 46 BA 8E 06 E8 0A 8B  46 BA 26 39 06 EC EF 7F   .F...... F.&9....
5040: 03 E9 AE 05 8B 46 D8 89  46 DC C7 46 F8 FF FF B8   .....F.. F..F....
5050: 1A 00 F7 6E D8 8B D8 8E  06 F8 0A 26 8B 87 A2 72   ...n.... ...&...r
5060: 89 46 EC B8 1A 00 F7 6E  D8 8B D8 26 8B 87 A4 72   .F.....n ...&...r
5070: 89 46 E2 FF 46 D8 8B 46  D6 99 89 46 A6 89 56 A8   .F..F..F ...F..V.
5080: B8 1A 00 F7 6E D8 8B D8  8E 06 F8 0A 26 83 BF A2   ....n... ....&...
5090: 72 FF 75 03 E9 7B 03 C7  46 CA 00 00 B8 1A 00 F7   r.u..{.. F.......
50A0: 6E D8 8B D8 26 8B 87 A2  72 89 46 FA B8 1A 00 F7   n...&... r.F.....
50B0: 6E D8 8B D8 26 8B 87 A4  72 89 46 F4 B8 1A 00 F7   n...&... r.F.....
```

```
50C0:  6E D8 8B D8 26 C7 87 A6  72 01 00 B8 1A 00 F7 6E   n...&... r......n
50D0:  D8 8B D8 26 8B 87 B2 72  2B 06 18 0C 89 46 B0 B8   ...&...r +....F..
50E0:  1A 00 F7 6E D8 8B D8 26  8B 87 B4 72 2B 06 18 0C   ...n...& ...r+...
50F0:  89 46 AA B8 1A 00 F7 6E  D8 8B D8 26 8B 87 AA 72   .F.....n ...&...r
5100:  2B 06 1A 0C 89 46 EE B8  1A 00 F7 6E D8 8B D8 26   +....F.. ...n...&
5110:  8B 87 AC 72 2B 06 1A 0C  89 46 E6 B8 1A 00 F7 6E   ...r+... .F.....n
5120:  D8 8B D8 26 8B 87 AE 72  2B 06 1C 0C 89 46 E4 B8   ...&...r +....F..
5130:  1A 00 F7 6E D8 8B D8 26  8B 87 B0 72 2B 06 1C 0C   ...n...& ...r+...
5140:  89 46 DA B8 1A 00 F7 6E  D8 8B D8 26 8B 87 B6 72   .F.....n ...&...r
5150:  2B 06 18 0C 89 46 C6 B8  1A 00 F7 6E D8 8B D8 26   +....F.. ...n...&
5160:  8B 87 BA 72 89 46 A2 B8  1A 00 F7 6E D8 8B D8 26   ...r.F.. ...n...&
5170:  8B 87 B8 72 89 46 BC FF  46 D8 B8 1A 00 F7 6E EC   ...r.F.. F.....n.
5180:  8B D8 8E 06 F4 0A 26 F6  87 2E 02 01 75 03 E9 13   ......&. ....u...
5190:  00 FF 76 B0 9A EA 29 E5  0A 83 C4 02 3D 12 00 7E   ..v...). ....=..~
51A0:  03 E9 3D 00 B8 1A 00 F7  6E E2 8B D8 8E 06 F4 0A   ..=..... n.......
51B0:  26 F6 87 2E 02 01 75 03  E9 13 00 FF 76 AA 9A EA   &.....u. ....v...
51C0:  29 E5 0A 83 C4 02 3D 12  00 7E 03 E9 13 00 FF 76   ).....=. .~.....v
51D0:  C6 9A EA 29 E5 0A 83 C4  02 3D 12 00 7F 03 E9 03   ...).... .=......
51E0:  00 E9 9C FE FF 76 EE 9A  EA 29 E5 0A 83 C4 02 3D   .....v.. .).....=
51F0:  2D 00 7E 03 E9 13 00 FF  76 E4 9A EA 29 E5 0A 83   -.~..... v...)...
5200:  C4 02 3D 2D 00 7F 03 E9  03 00 E9 73 FE B8 1A 00   ..=-.... ...s....
5210:  F7 6E EC 8B D8 8E 06 F4  0A 26 F6 87 2E 02 08 75   .n...... .&.....u
5220:  03 E9 17 00 B8 1A 00 F7  6E FA 8B D8 8E 06 F2 0A   ........ n.......
5230:  26 F6 87 78 8B 08 75 03  E9 8A 00 B8 1A 00 F7 6E   &..x..u. .......n
5240:  EC 8B D8 8E 06 F4 0A 26  F6 87 2E 02 08 74 03 E9   .......& .....t..
5250:  17 00 B8 1A 00 F7 6E FA  8B D8 8E 06 F2 0A 26 F6   ......n. ......&.
5260:  87 78 8B 08 74 03 E9 5C  00 B8 1A 00 F7 6E E2 8B   .x..t..\ .....n..
5270:  D8 8E 06 F4 0A 26 F6 87  2E 02 08 75 03 E9 17 00   .....&.. ...u....
5280:  B8 1A 00 F7 6E F4 8B D8  8E 06 F2 0A 26 F6 87 78   ....n... ....&..x
5290:  8B 08 75 03 E9 2E 00 B8  1A 00 F7 6E E2 8B D8 8E   ..u..... ...n....
52A0:  06 F4 0A 26 F6 87 2E 02  08 74 03 E9 1A 00 B8 1A   ...&.... .t......
52B0:  00 F7 6E F4 8B D8 8E 06  F2 0A 26 F6 87 78 8B 08   ..n..... ..&..x..
52C0:  75 03 E9 03 00 FF 46 CA  FF 76 E6 9A EA 29 E5 0A   u.....F. .v...)..
52D0:  83 C4 02 3D 2D 00 7E 03  E9 13 00 FF 76 DA 9A EA   ...=-.~. ....v...
52E0:  29 E5 0A 83 C4 02 3D 2D  00 7F 03 E9 03 00 E9 8F   ).....=- ........
52F0:  FD 8B 46 E6 8B C8 F7 E9  8B C8 8B 46 DA 8B D8 F7   ..F..... ...F....
5300:  EB 03 C8 8B 46 BC 8B D8  F7 EB 03 C1 8B C8 8B 46   ....F... .......F
5310:  C6 8B D8 F7 EB 03 C1 8B  C8 8B 46 AA 8B D8 F7 EB   ........ ..F.....
5320:  03 C1 8B C8 8B 46 B0 8B  D8 F7 EB 03 C1 8B C8 8B   .....F.. ........
5330:  46 E4 8B D8 F7 EB 03 C1  8B C8 8B 46 EE 8B D8 F7   F....... ...F....
5340:  EB 03 C1 99 89 46 E8 89  56 EA 8B 46 A2 99 52 50   .....F.. V..F..RP
5350:  FF 76 EA FF 76 E8 9A 60  2A E5 0A 89 46 B6 89 56   .v..v..` *...F..V
5360:  B8 8B 46 FC 99 3B 56 EA  7D 03 E9 A2 00 7E 03 E9   ..F..;V. }....~..
5370:  08 00 3B 46 E8 77 03 E9  95 00 83 7E EA 00 7D 03   ..;F.w.. ...~..}.
5380:  E9 8C 00 7E 03 E9 09 00  83 7E E8 00 77 03 E9 7E   ...~.... .~..w..~
5390:  00 8B 46 B6 8B 56 B8 39  56 A8 7D 03 E9 20 00 7E   ..F..V.9 V.}.. .~
53A0:  03 E9 08 00 39 46 A6 77  03 E9 13 00 8B 46 B6 8B   ....9F.w .....F..
53B0:  56 B8 89 46 A6 89 56 A8  8B 46 D8 48 89 46 F8 8B   V..F..V. .F.H.F..
53C0:  46 B4 39 46 CA 7D 03 E9  26 00 8B 46 B4 39 46 CA   F.9F.}.. &..F.9F.
53D0:  74 03 E9 3A 00 8B 46 AC  8B 56 AE 39 56 B8 7E 03   t..:..F. .V.9V.~.
53E0:  E9 2C 00 7D 03 E9 08 00  39 46 B6 72 03 E9 1F 00   .,.}.... 9F.r....
53F0:  8B 46 B6 8B 56 B8 89 46  AC 89 56 AE 8B 46 DC 89   .F..V..F ..V..F..
5400:  46 D4 8B 46 D8 48 89 46  C8 8B 46 CA 89 46 B4 E9   F..F.H.F ..F..F..
5410:  6E FC 83 7E F8 FF 7F 03  E9 D1 01 C7 46 FE FF FF   n..~.... ....F...
```

MATCH.DMP Thursday, January 6, 1994 12:04pm Page 26

```
5420:  B8 1A 00 F7 6E DC 8B D8  8E 06 F8 0A 26 8B 87 A2   ....n... ....&...
5430:  72 89 46 EC B8 1A 00 F7  6E DC 8B D8 26 8B 87 A4   r.F..... n...&...
5440:  72 89 46 E2 B8 1A 00 F7  6E F8 8B D8 26 8B 87 A2   r.F..... n...&...
5450:  72 89 46 FA B8 1A 00 F7  6E F8 8B D8 26 8B 87 A4   r.F..... n...&...
5460:  72 89 46 F4 B8 1A 00 F7  6E EC 8B D8 8E 06 F4 0A   r.F..... n.......
5470:  26 F6 87 2E 02 01 75 03  E9 39 00 B8 1A 00 F7 6E   &.....u. .9.....n
5480:  EC 8B D8 26 F6 87 2E 02  10 75 03 E9 26 00 B8 1A   ...&.... .u..&...
5490:  00 F7 6E FA 8B D8 8E 06  F2 0A 26 F6 87 78 8B 01   ..n..... ..&..x..
54A0:  75 03 E9 0F 00 8B 46 FA  89 46 FE 8B 46 EC 89 46   u.....F. .F..F..F
54B0:  F6 E9 4D 00 B8 1A 00 F7  6E E2 8B D8 8E 06 F4 0A   ..M..... n.......
54C0:  26 F6 87 2E 02 01 75 03  E9 36 00 B8 1A 00 F7 6E   &.....u. .6.....n
54D0:  E2 8B D8 26 F6 87 2E 02  10 75 03 E9 23 00 B8 1A   ...&.... .u..#...
54E0:  00 F7 6E F4 8B D8 8E 06  F2 0A 26 F6 87 78 8B 01   ..n..... ..&..x..
54F0:  75 03 E9 0C 00 8B 46 F4  89 46 FE 8B 46 E2 89 46   u.....F. .F..F..F
5500:  F6 83 7E FE FF 7F 03 E9  E2 00 8E 06 E4 0A 26 FF   ..~.~... ......&.
5510:  06 60 89 83 7E B2 FF 7F  03 E9 C4 00 B8 1A 00 F7   .`..~... ........
5520:  6E F6 8B D8 8E 06 F4 0A  26 8B 87 16 02 8B C8 B8   n....... &.......
5530:  1A 00 F7 6E A4 8B D8 26  2B 8F 16 02 89 4E DE B8   ...n...& +....N..
5540:  1A 00 F7 6E F6 8B D8 26  8B 87 18 02 8B C8 B8 1A   ...n...& ........
5550:  00 F7 6E A4 8B D8 26 2B  8F 18 02 89 4E E0 B8 1A   ..n...&+ ....N...
5560:  00 F7 6E FE 8B D8 8E 06  F2 0A 26 8B 87 60 8B 8B   ..n..... ..&..`..
5570:  C8 B8 1A 00 F7 6E B2 8B  D8 26 2B 8F 60 8B 89 4E   .....n.. .&+.`..N
5580:  F0 B8 1A 00 F7 6E FE 8B  D8 26 8B 87 62 8B 8B C8   .....n.. .&..b...
5590:  B8 1A 00 F7 6E B2 8B D8  26 2B 8F 62 8B 89 4E F2   ....n... &+.b..N.
55A0:  8B 46 DE 2B 46 F0 50 9A  EA 29 E5 0A 83 C4 02 99   .F.+F.P. .)......
55B0:  01 46 BE 11 56 C0 8B 46  E0 2B 46 F2 50 9A EA 29   .F..V..F .+F.P..)
55C0:  E5 0A 83 C4 02 99 01 46  C2 11 56 C4 8B 46 DE 99   .......F ..V..F..
55D0:  01 46 CC 11 56 CE 8B 46  E0 99 01 46 D0 11 56 D2   .F..V..F ...F..V.
55E0:  8B 46 FE 89 46 B2 8B 46  F6 89 46 A4 FF 46 D8 E9   .F..F..F ..F..F..
55F0:  3E FA 8B 46 D6 99 3B 56  AE 7D 03 E9 9C 00 7E 03   >..F..;V .}....~.
5600:  E9 08 00 3B 46 AC 77 03  E9 8F 00 B8 1A 00 F7 6E   ...;F.w. .......n
5610:  D4 8B D8 8E 06 F8 0A 26  8B 87 A2 72 C4 5E 06 26   .......& ...r.^.&
5620:  89 07 B8 1A 00 F7 6E D4  8B D8 8E 06 F8 0A 26 8B   ......n. ......&.
5630:  87 A4 72 C4 5E 0A 26 89  07 B8 1A 00 F7 6E C8 8B   ..r.^.&. .....n..
5640:  D8 8E 06 F8 0A 26 8B 87  A2 72 C4 5E 0E 26 89 07   .....&.. .r.^.&..
5650:  B8 1A 00 F7 6E C8 8B D8  8E 06 F8 0A 26 8B 87 A4   ....n... ....&...
5660:  72 C4 5E 12 26 89 07 8E  06 E4 0A 26 83 3E 60 89   r.^.&... ...&.>`.
5670:  02 7F 03 E9 13 00 8B 46  C2 03 46 BE 99 26 F7 3E   .......F ..F..&.>
5680:  60 89 26 A3 5E 89 E9 0B  00 8E 06 E4 0A 26 C7 06   `.&.^... .....&..
5690:  5E 89 64 00 B8 01 00 E9  06 00 B8 00 00 E9 00 00   ^.d..... ........
56A0:  5E 5F 8B E5 5D CB 55 8B  EC 81 EC 02 00 57 56 B8   ^_..].U. .....WV.
56B0:  1A 00 F7 6E 08 8B D8 8E  06 F4 0A 26 FF B7 18 02   ...n.... ...&....
56C0:  B8 1A 00 F7 6E 08 8B D8  26 FF B7 16 02 B8 1A 00   ....n... &.......
56D0:  F7 6E 06 8B D8 26 FF B7  18 02 B8 1A 00 F7 6E 06   .n...&.. ......n.
56E0:  8B D8 26 FF B7 16 02 B8  1A 00 F7 6E 0C 8B D8 8E   ..&..... ...n....
56F0:  06 F2 0A 26 FF B7 62 8B  B8 1A 00 F7 6E 0C 8B D8   ...&..b. ....n...
5700:  26 FF B7 60 8B B8 1A 00  F7 6E 0A 8B D8 26 FF B7   &..`.... .n...&..
5710:  62 8B B8 1A 00 F7 6E 0A  8B D8 26 FF B7 60 8B 9A   b.....n. ..&..`..
5720:  8A 01 73 08 83 C4 10 89  46 FE B8 1A 00 F7 6E 0C   ..s..... F.....n.
5730:  8B D8 8E 06 F2 0A 26 FF  B7 62 8B B8 1A 00 F7 6E   ......&. .b.....n
5740:  0C 8B D8 26 FF B7 60 8B  B8 1A 00 F7 6E 0A 8B D8   ...&..`. ....n...
5750:  26 FF B7 62 8B B8 1A 00  F7 6E 0A 8B D8 26 FF B7   &..b.... .n...&..
5760:  60 8B B8 1A 00 F7 6E 08  8B D8 8E 06 F4 0A 26 FF   `.....n. ......&.
5770:  B7 18 02 B8 1A 00 F7 6E  08 8B D8 26 FF B7 16 02   .......n ...&....
```

```
5780:  B8 1A 00 F7 6E 06 8B D8  26 FF B7 18 02 B8 1A 00   ....n... &.......
5790:  F7 6E 06 8B D8 26 FF B7  16 02 9A CF 02 73 08 83   .n...&.. .....s..
57A0:  C4 10 8B 46 FE 8E 06 E4  0A 26 A3 64 89 5E 5F 8B   ...F.... .&.d.^_.
57B0:  E5 5D CB 55 8B EC 81 EC  12 00 57 56 8D 46 EE 16   .].U.... ..WV.F..
57C0:  50 8D 4E F0 16 51 9A B5  05 20 0A 83 C4 08 8B 46   P.N..Q.. . .....F
57D0:  EE 89 46 FE C7 46 FC 00  00 C7 46 F4 00 00 E9 03   ..F..F.. ..F.....
57E0:  00 FF 46 F4 C4 5E 06 8B  46 F4 26 39 47 02 7F 03   ..F..^.. F.&9G...
57F0:  E9 1E 01 8B 46 F4 8B C8  D1 E0 03 C1 D1 E0 03 46   ....F... .......F
5800:  06 8B 56 08 05 F8 52 52  50 8B 46 F4 8B C8 D1 E0   ..V...RR P.F.....
5810:  03 C1 D1 E0 03 46 06 8B  56 08 05 F6 52 52 50 9A   .....F.. V...RRP.
5820:  F4 01 73 08 83 C4 08 8B  76 F4 8B C6 D1 E6 03 F0   ..s..... v.......
5830:  D1 E6 C4 5E 06 26 8B 80  F6 52 89 46 F8 8B 76 F4   ...^.&.. .R.F..v.
5840:  8B C6 D1 E6 03 F0 D1 E6  C4 5E 06 26 8B 80 F8 52   ........ .^.&...R
5850:  89 46 F6 8B 76 F4 8B C6  D1 E6 03 F0 D1 E6 C4 5E   .F..v... .......^
5860:  06 26 8B 80 FA 52 89 46  FA B8 1A 00 F7 6E FA 8B   .&...R.F .....n..
5870:  F0 C4 5E 06 8B 46 F8 26  89 80 B6 01 B8 1A 00 F7   ..^..F.& ........
5880:  6E FA 8B F0 C4 5E 06 8B  46 F6 26 89 80 B8 01 8B   n....^.. F.&.....
5890:  46 F6 39 46 FE 7F 03 E9  06 00 8B 46 F6 89 46 FE   F.9F.... ...F..F.
58A0:  8B 46 F6 39 46 FC 7C 03  E9 06 00 8B 46 F6 89 46   .F.9F.|. ....F..F
58B0:  FC C7 46 F2 00 00 E9 03  00 FF 46 F2 83 7E F2 02   ..F..... ..F..~..
58C0:  7E 03 E9 49 00 B8 1A 00  F7 6E FA 8B 76 F2 8B CE   ~..I.... .n..v...
58D0:  D1 E6 03 F1 D1 E6 03 F0  C4 5E 06 26 83 B8 BA 01   ........ .^.&....
58E0:  FF 75 03 E9 25 00 8E 06  E4 0A 26 A1 64 89 8B C8   .u..%... ..&.d...
58F0:  B8 1A 00 F7 6E FA 8B 76  F2 8B D6 D1 E6 03 F2 D1   ....n..v ........
5900:  E6 03 F0 C4 5E 06 26 01  88 BC 01 E9 AB FF E9 D0   ....^.&. ........
5910:  FE 8B 46 0A 8B 56 0C 05  12 00 52 50 8B 46 0A 8B   ..F..V.. ..RP.F..
5920:  56 0C 05 10 00 52 50 9A  F4 01 73 08 83 C4 08 8B   V....RP. ..s.....
5930:  46 FE C4 5E 0A 26 89 47  14 8B 46 FC C4 5E 0A 26   F..^.&.G ..F..^.&
5940:  89 47 16 5E 5F 8B E5 5D  CB 55 8B EC 81 EC 20 00   .G.^_..] .U.... .
5950:  57 56 B8 00 00 C4 5E 0A  26 89 47 08 C4 5E 0A 26   WV....^. &.G..^.&
5960:  89 47 02 C4 5E 0A 26 89  47 06 C4 5E 0A 26 89 47   .G..^.&. G..^.&.G
5970:  04 C4 5E 0A 26 C7 47 0A  00 00 B8 00 00 89 46 E0   ..^.&.G. ......F.
5980:  99 89 46 F0 89 56 F2 B8  00 00 BA 00 00 89 46 E2   ..F..V.. ......F.
5990:  89 56 E4 89 46 E8 89 56  EA 8D 46 E6 16 50 8D 4E   .V..F..V ..F..P.N
59A0:  EC 16 51 9A B5 05 20 0A  83 C4 08 8B 46 E6 89 46   ..Q... . ....F..F
59B0:  FE C7 46 FC 00 00 C7 46  EE 00 00 E9 03 00 FF 46   ..F....F .......F
59C0:  EE C4 5E 06 8B 46 EE 26  39 07 7F 03 E9 3D 02 8B   ..^..F.& 9....=..
59D0:  76 EE D1 E6 C4 5E 06 26  8B 40 26 89 46 F8 83 7E   v....^.& .@&.F..~
59E0:  F8 FF 75 03 E9 22 02 B8  1A 00 F7 6E F8 8B F0 C4   ..u..".. ...n....
59F0:  5E 06 26 83 A0 CE 01 F9  B8 1A 00 F7 6E F8 8B F0   ^.&..... ....n...
5A00:  C4 5E 06 26 8B 80 B6 01  99 01 46 E8 11 56 EA B8   .^.&.... ..F..V..
5A10:  1A 00 F7 6E F8 8B F0 C4  5E 06 26 8B 80 B8 01 99   ...n.... ^.&.....
5A20:  01 46 E2 11 56 E4 B8 1A  00 F7 6E F8 8B F0 C4 5E   .F..V... ..n....^
5A30:  06 8B 46 FE 26 39 80 B8  01 7C 03 E9 13 00 B8 1A   ..F.&9.. .|......
5A40:  00 F7 6E F8 8B F0 C4 5E  06 26 8B 80 B8 01 89 46   ..n....^ .&.....F
5A50:  FE B8 1A 00 F7 6E F8 8B  F0 C4 5E 06 8B 46 FC 26   .....n.. ..^..F.&
5A60:  39 80 B8 01 7F 03 E9 13  00 B8 1A 00 F7 6E F8 8B   9....... .....n..
5A70:  F0 C4 5E 06 26 8B 80 B8  01 89 46 FC B8 1A 00 F7   ..^.&... ..F.....
5A80:  6E F8 8B F0 C4 5E 06 26  8A 80 CE 01 25 80 00 B1   n....^.& ....%...
5A90:  07 D3 E8 C4 5E 0A 26 01  47 0A FF 76 F8 8B 46 06   ....^.&. G..v..F.
5AA0:  8B 56 08 05 B6 01 52 50  9A 08 00 73 08 83 C4 06   .V....RP ...s....
5AB0:  89 46 F8 83 7E F8 FF 75  03 E9 4A 01 B8 1A 00 F7   .F..~..u ..J.....
5AC0:  6E F8 8B F0 C4 5E 06 26  F6 80 CE 01 08 75 03 E9   n....^.& .....u..
5AD0:  7F 00 C4 5E 0A 26 FF 47  04 C7 46 F4 00 00 E9 03   ...^.&.G ..F.....
```

MATCH.DMP    Thursday, January 6, 1994   12:04pm    Page 28

```
5AE0:  00 FF 46 F4 83 7E F4 03  7C 03 E9 64 00 B8 1A 00   ..F..~.. |..d....
5AF0:  F7 6E F8 8B F0 8B 46 F4  8B C8 D1 E0 03 C1 D1 E0   .n....F. ........
5B00:  03 F0 C4 5E 06 26 83 B8  BA 01 FF 74 03 E9 3E 00   ...^.&.. ...t..>.
5B10:  B8 1A 00 F7 6E F8 8B F0  8B 46 F4 8B C8 D1 E0 03   ....n... .F......
5B20:  C1 D1 E0 03 F0 C4 5E 06  26 C7 80 BC 01 FF FF B8   ......^. &.......
5B30:  1A 00 F7 6E F8 8B F0 8B  46 F4 8B C8 D1 E0 03 C1   ...n.... F.......
5B40:  D1 E0 03 F0 C4 5E 06 26  C7 80 BE 01 FF FF E9 90   .....^.& ........
5B50:  FF B8 1A 00 F7 6E F8 8B  F0 C4 5E 06 26 8B 80 C0   .....n.. ..^.&...
5B60:  01 89 46 F6 B8 1A 00 F7  6E F8 8B F0 C4 5E 06 26   ..F..... n....^.&
5B70:  F6 80 CE 01 01 75 03 E9  1D 00 B8 1A 00 F7 6E F8   .....u.. ......n.
5B80:  8B F0 C4 5E 06 26 F6 80  CE 01 10 74 03 E9 07 00   ...^.&.. ...t....
5B90:  C4 5E 0A 26 FF 47 08 B8  1A 00 F7 6E F6 8B F0 C4   .^.&.G.. ...n....
5BA0:  5E 06 26 F6 80 CE 01 01  74 03 E9 16 00 B8 1A 00   ^.&..... t.......
5BB0:  F7 6E F8 8B F0 C4 5E 06  26 F6 80 CE 01 01 75 03   .n....^. &.....u.
5BC0:  E9 07 00 C4 5E 0A 26 FF  47 06 B8 1A 00 F7 6E F8   ....^.&. G.....n.
5BD0:  8B F0 C4 5E 06 26 8B 80  C4 01 89 46 FA 83 7E FA   ...^.&.. ...F..~.
5BE0:  00 7F 03 E9 0A 00 8B 46  FA C4 5E 0A 26 01 47 02   .......F ..^.&.G.
5BF0:  C4 5E 0A 26 83 7F 02 00  7C 03 E9 09 00 C4 5E 0A   .^.&.... |.....^.
5C00:  26 C7 47 02 30 75 E9 D5  FD E9 B2 FD C4 5E 06 26   &.G.0u.. .....^.&
5C10:  8B 47 02 99 52 50 FF 76  EA FF 76 E8 9A 60 2A E5   .G..RP.v ..v..`*.
5C20:  0A C4 5E 0A 26 89 47 10  C4 5E 06 26 8B 47 02 99   ..^.&.G. .^.&.G..
5C30:  52 50 FF 76 E4 FF 76 E2  9A 60 2A E5 0A C4 5E 0A   RP.v..v. .`*...^.
5C40:  26 89 47 12 8B 46 FE C4  5E 0A 26 89 47 14 8B 46   &.G..F.. ^.&.G..F
5C50:  FC C4 5E 0A 26 89 47 16  5E 5F 8B E5 5D CB 55 8B   ..^.&.G. ^_..].U.
5C60:  EC 81 EC 16 00 57 56 8D  46 EA 16 50 8D 46 EE 16   .....WV. F..P.F..
5C70:  50 9A B5 05 20 0A 83 C4  08 C4 5E 0A 26 C7 47 18   P... ... ..^.&.G.
5C80:  00 00 8B 46 EE 48 C4 5E  0A 26 89 47 1A C4 5E 0A   ...F.H.^ .&.G..^.
5C90:  26 8B 47 14 05 0A 00 C4  5E 0A 26 8B 4F 12 81 E9   &.G..... ^.&.O...
5CA0:  8C 00 3B C1 7C 03 E9 02  00 8B C1 89 46 FC C4 5E   ..;.|... ....F..^
5CB0:  0A 26 8B 47 16 2D 0A 00  C4 5E 0A 26 8B 4F 12 81   .&.G.-.. .^.&.O..
5CC0:  C1 8C 00 3B C1 7F 03 E9  02 00 8B C1 89 46 F8 B8   ...;.... .....F..
5CD0:  00 00 89 46 F4 89 46 FA  C7 46 F0 00 00 E9 03 00   ...F..F. .F......
5CE0:  FF 46 F0 C4 5E 06 8B 46  F0 26 39 47 02 7F 03 E9   .F..^..F .&9G....
5CF0:  87 00 B8 1A 00 8B 76 F0  8B CE D1 E6 03 F1 D1 E6   ......v. ........
5D00:  C4 5E 06 26 F7 A8 FA 52  8B F0 C4 5E 06 26 F6 80   .^.&...R ...^.&..
5D10:  CE 01 01 74 03 E9 5E 00  8B 76 F0 8B C6 D1 E6 03   ...t..^. .v......
5D20:  F0 D1 E6 C4 5E 06 8B 46  FC 26 39 80 F8 52 7F 03   ....^..F .&9..R..
5D30:  E9 43 00 8B 76 F0 8B C6  D1 E6 03 F0 D1 E6 C4 5E   .C..v... .......^
5D40:  06 8B 46 F8 26 39 80 F8  52 7C 03 E9 28 00 C4 5E   ..F.&9.. R|..(..^
5D50:  0A 26 8B 47 10 8B 76 F0  8B CE D1 E6 03 F1 D1 E6   .&.G..v. ........
5D60:  C4 5E 06 26 39 80 F6 52  7C 03 E9 06 00 FF 46 FA   .^.&9..R |.....F.
5D70:  E9 03 00 FF 46 F4 E9 67  FF B8 28 00 F7 6E FA B9   ....F..g ..(..n..
5D80:  64 00 99 F7 F9 89 46 F6  B8 3C 00 F7 6E F4 99 F7   d.....F. .<..n...
5D90:  F9 89 46 F2 B8 00 00 89  46 FE 89 46 EC C7 46 F0   ..F..... F..F..F.
5DA0:  00 00 E9 03 00 FF 46 F0  C4 5E 06 8B 46 F0 26 39   ......F. .^..F.&9
5DB0:  47 02 7F 03 E9 D1 00 B8  1A 00 8B 76 F0 8B CE D1   G....... ...v....
5DC0:  E6 03 F1 D1 E6 C4 5E 06  26 F7 A8 FA 52 8B F0 C4   ......^. &...R...
5DD0:  5E 06 26 F6 80 CE 01 01  74 03 E9 A8 00 8B 76 F0   ^.&..... t.....v.
5DE0:  8B C6 D1 E6 03 F0 D1 E6  C4 5E 06 8B 46 FC 26 39   ........ .^..F.&9
5DF0:  80 F8 52 7F 03 E9 8D 00  8B 76 F0 8B C6 D1 E6 03   ..R..... .v......
5E00:  F0 D1 E6 C4 5E 06 8B 46  F8 26 39 80 F8 52 7C 03   ....^..F .&9..R|.
5E10:  E9 72 00 C4 5E 0A 26 8B  47 10 8B 76 F0 8B CE D1   .r..^.&. G..v....
5E20:  E6 03 F1 D1 E6 C4 5E 06  26 39 80 F6 52 7C 03 E9   ......^. &9..R|..
5E30:  2B 00 FF 46 EC 8B 46 EC  39 46 F6 74 03 E9 1A 00   +..F..F. 9F.t....
```

MATCH.DMP Thursday, January 6, 1994 12:04pm Page 29

```
5E40:  8B 76 F0 8B C6 D1 E6 03  F0 D1 E6 C4 5E 06 26 8B   .v...... ....^.&.
5E50:  80 F6 52 C4 5E 0A 26 89  47 18 E9 28 00 FF 46 FE   ..R.^.&. G..(..F.
5E60:  8B 46 F2 39 46 FE 74 03  E9 1A 00 8B 76 F0 8B C6   .F.9F.t. ....v...
5E70:  D1 E6 03 F0 D1 E6 C4 5E  06 26 8B 80 F6 52 C4 5E   .......^ .&...R.^
5E80:  0A 26 89 47 1A E9 1D FF  5E 5F 8B E5 5D CB 55 8B   .&.G.... ^_..].U.
5E90:  EC 81 EC 14 00 57 56 8B  76 0C 8B C6 D1 E6 03 F0   .....WV. v.......
5EA0:  D1 E6 C4 5E 08 26 8B 80  FA 52 89 46 FA C7 46 F0   ...^.&.. .R.F..F.
5EB0:  01 00 B8 1A 00 F7 6E FA  8B F0 C4 5E 08 26 83 B8   ......n. ...^.&..
5EC0:  C0 01 FF 74 03 E9 05 00  C7 46 F0 00 00 B8 1A 00   ...t.... .F......
5ED0:  F7 6E FA 8B F0 8B 46 F0  8B C8 D1 E0 03 C1 D1 E0   .n....F. ........
5EE0:  03 F0 C4 5E 08 26 8B 80  BC 01 89 46 F8 8B 46 F8   ...^.&.. ...F..F.
5EF0:  B9 B4 00 99 F7 F9 83 FA  5A 75 03 E9 CB 01 FF 76   ........ Zu.....v
5F00:  F8 9A A6 02 42 08 83 C4  02 89 46 FC 8B 46 0E 99   ....B... ..F..F..
5F10:  F7 D8 83 D2 00 F7 DA 89  46 F2 89 56 F4 8B 46 FC   ........ F..V..F.
5F20:  99 52 50 8D 46 F2 50 9A  58 2B E5 0A B8 E8 03 BA   .RP.F.P. X+......
5F30:  00 00 52 50 FF 76 F4 FF  76 F2 9A 60 2A E5 0A 89   ..RP.v.. v..`*...
5F40:  46 F6 FF 76 F6 9A EA 29  E5 0A 83 C4 02 3D 3C 00   F..v...) .....=<.
5F50:  7E 03 E9 74 01 8B 46 0E  8B 76 0C 8B CE D1 E6 03   ~..t..F. .v......
5F60:  F1 D1 E6 C4 5E 08 26 01  80 F6 52 8B 76 0C 8B C6   ....^.&. ..R.v...
5F70:  D1 E6 03 F0 D1 E6 C4 5E  08 26 8B 80 F6 52 8B C8   .......^ .&...R..
5F80:  B8 1A 00 F7 6E FA 8B F0  C4 5E 08 26 89 88 B6 01   ....n... .^.&....
5F90:  8B 46 F6 8B 76 0C 8B CE  D1 E6 03 F1 D1 E6 C4 5E   .F..v... .......^
5FA0:  08 26 01 80 F8 52 8B 76  0C 8B C6 D1 E6 03 F0 D1   .&...R.v ........
5FB0:  E6 C4 5E 08 26 8B 80 F8  52 8B C8 B8 1A 00 F7 6E   ..^.&... R......n
5FC0:  FA 8B F0 C4 5E 08 26 89  88 B8 01 FF 76 0E 9A EA   ....^.&. ....v...
5FD0:  29 E5 0A 83 C4 02 B9 10  27 F7 E9 89 46 F2 89 56   )....... '...F..V
5FE0:  F4 FF 76 F8 9A A1 00 42  08 83 C4 02 50 9A EA 29   ..v....B ....P..)
5FF0:  E5 0A 83 C4 02 3D 01 00  7C 03 E9 06 00 B8 01 00   .....=.. |.......
6000:  E9 14 00 FF 76 F8 9A A1  00 42 08 83 C4 02 50 9A   ....v... .B....P.
6010:  EA 29 E5 0A 83 C4 02 99  52 50 8D 46 F2 50 9A 38   .)...... RP.F.P.8
6020:  2B E5 0A 8B 46 F2 89 46  EE B8 1A 00 F7 6E FA 8B   +...F..F .....n..
6030:  F0 8B 46 F0 8B C8 D1 E0  03 C1 D1 E0 03 F0 C4 5E   ..F..... .......^
6040:  08 8B 46 EE 26 01 80 BE  01 B8 1A 00 F7 6E FA 8B   ..F.&... .....n..
6050:  F0 8B 46 F0 8B C8 D1 E0  03 C1 D1 E0 03 F0 C4 5E   ..F..... .......^
6060:  08 26 8B 80 BA 01 89 46  FE 83 7E F0 01 74 03 E9   .&.....F ..~..t..
6070:  44 00 B8 1A 00 F7 6E FE  8B F0 C4 5E 08 8B 46 FA   D.....n. ...^..F.
6080:  26 39 80 BA 01 74 03 E9  16 00 B8 1A 00 F7 6E FE   &9...t.. ......n.
6090:  8B F0 C4 5E 08 8B 46 EE  26 01 80 BE 01 E9 13 00   ...^..F. &.......
60A0:  B8 1A 00 F7 6E FE 8B F0  C4 5E 08 8B 46 EE 26 01   ....n... .^..F.&.
60B0:  80 CA 01 E9 13 00 B8 1A  00 F7 6E FE 8B F0 C4 5E   ........ ..n....^
60C0:  08 8B 46 EE 26 01 80 C4  01 5E 5F 8B E5 5D CB 55   ..F.&... .^_..].U
60D0:  8B EC 81 EC 06 00 57 56  C4 5E 0C 26 8B 47 14 05   ......WV .^.&.G..
60E0:  0A 00 C4 5E 0C 26 8B 4F  12 81 E9 8C 00 3B C1 7C   ...^.&.O .....;.|
60F0:  03 E9 02 00 8B C1 89 46  FE C4 5E 0C 26 8B 47 16   .......F ..^.&.G.
6100:  2D 0A 00 C4 5E 0C 26 8B  4F 12 81 C1 8C 00 3B C1   -...^.&. O.....;.
6110:  7F 03 E9 02 00 8B C1 89  46 FC C7 46 FA 00 00 E9   ........ F..F....
6120:  03 00 FF 46 FA C4 5E 08  8B 46 FA 26 39 47 02 7F   ...F..^. .F.&9G..
6130:  03 E9 2D 01 B8 1A 00 8B  76 FA 8B CE D1 E6 03 F1   ..-..... v.......
6140:  D1 E6 C4 5E 08 26 F7 A8  FA 52 8B F0 C4 5E 08 26   ...^.&.. .R...^.&
6150:  F6 80 CE 01 01 74 03 E9  04 01 8B 76 FA 8B C6 D1   .....t.. ...v....
6160:  E6 03 F0 D1 E6 C4 5E 08  8B 46 FE 26 39 80 F8 52   ......^. .F.&9..R
6170:  7F 03 E9 E9 00 8B 76 FA  8B C6 D1 E6 03 F0 D1 E6   ......v. ........
6180:  C4 5E 08 8B 46 FC 26 39  80 F8 52 7C 03 E9 CE 00   .^..F.&9 ..R|....
6190:  83 7E 10 00 74 03 E9 64  00 C4 5E 0C 26 8B 47 10   .~..t..d ..^.&.G.
```

MATCH.DMP Thursday, January 6, 1994 12:04pm Page 30

```
61A0:  8B 76 FA 8B CE D1 E6 03  F1 D1 E6 C4 5E 08 26 39   .v...... ....^.&9
61B0:  80 F6 52 7C 03 E9 42 00  8B 76 FA 8B C6 D1 E6 03   ..R|..B. .v......
61C0:  F0 D1 E6 C4 5E 08 26 8B  80 F6 52 C4 5E 0C 26 2B   ....^.&. ..R.^.&+
61D0:  47 18 50 9A EA 29 E5 0A  83 C4 02 3D 1E 00 7C 03   G.P..).. ...=..|.
61E0:  E9 17 00 FF 76 12 FF 76  FA FF 76 0A FF 76 08 FF   ....v..v ..v..v..
61F0:  76 06 9A 0E 1E E8 03 83  C4 0A E9 61 00 C4 5E 0C   v....... ...a..^.
6200:  26 8B 47 10 8B 76 FA 8B  CE D1 E6 03 F1 D1 E6 C4   &.G..v.. ........
6210:  5E 08 26 39 80 F6 52 7F  03 E9 42 00 8B 76 FA 8B   ^.&9..R. ..B..v..
6220:  C6 D1 E6 03 F0 D1 E6 C4  5E 08 26 8B 80 F6 52 C4   ........ ^.&...R.
6230:  5E 0C 26 2B 47 1A 50 9A  EA 29 E5 0A 83 C4 02 3D   ^.&+G.P. .).....=
6240:  1E 00 7C 03 E9 17 00 FF  76 12 FF 76 FA FF 76 0A   ..|..... v..v..v.
6250:  FF 76 08 FF 76 06 9A 0E  1E E8 03 83 C4 0A E9 C1   .v..v... ........
6260:  FE 5E 5F 8B E5 5D CB 55  8B EC 81 EC 16 00 57 56   .^_..].U ......WV
6270:  C7 46 FA 00 00 C7 46 FC  00 00 8B 46 0A D1 E0 89   .F....F. ...F....
6280:  46 F4 8B 46 F4 03 46 14  3B 06 10 0C 7F 03 E9 03   F..F..F. ;.......
6290:  00 A1 10 0C 89 46 EE 8B  46 F4 03 46 16 3B 06 12   .....F.. F..F.;..
62A0:  0C 7F 03 E9 03 00 A1 12  0C 89 46 EC 8B 46 14 89   ........ ..F..F..
62B0:  46 F6 E9 03 00 FF 46 F6  8B 46 F6 39 46 EE 7F 03   F.....F. .F.9F...
62C0:  E9 36 00 8B 46 16 89 46  F2 E9 03 00 FF 46 F2 8B   .6..F..F .....F..
62D0:  46 F2 39 46 EC 7F 03 E9  1C 00 B8 3C 00 F7 6E F2   F.9F.... ...<..n.
62E0:  8B D8 03 5E 06 8E 46 08  8B 76 F6 26 8A 00 2A E4   ...^..F. .v.&..*.
62F0:  01 46 FC E9 D6 FF E9 BC  FF 8B 46 18 2B 46 0A 03   .F...... ..F.+F..
6300:  46 14 8B 0E 10 0C 2B 4E  0A 3B C1 7F 03 E9 02 00   F.....+N .;......
6310:  8B C1 89 46 EE 8B 46 1A  2B 46 0A 03 46 16 8B 0E   ...F..F. +F..F...
6320:  12 0C 2B 4E 0A 3B C1 7F  03 E9 02 00 8B C1 89 46   ..+N.;.. .......F
6330:  EC 8B 46 0A 01 46 14 8B  46 0A 01 46 16 8B 46 14   ..F..F.. F..F..F.
6340:  89 46 F6 E9 03 00 FF 46  F6 8B 46 F6 39 46 EE 7D   .F.....F ..F.9F.}
6350:  03 E9 7B 01 8B 46 FC 89  46 F8 8B 46 F6 39 46 14   ..{..F.. F..F.9F.
6360:  75 03 E9 5A 00 8B 46 16  2B 46 0A 89 46 F0 E9 03   u..Z..F. +F..F...
6370:  00 FF 46 F0 8B 46 16 03  46 0A 3B 46 F0 7D 03 E9   ..F..F.. F.;F.}..
6380:  3D 00 B8 3C 00 F7 6E F0  8B D8 2B 5E 0A 03 5E 06   =..<..n. ..+^..^.
6390:  8E 46 08 4B 8B 76 F6 26  8A 00 2A E4 8B C8 B8 3C   .F.K.v.& ..*....<
63A0:  00 F7 6E F0 8B D8 03 5E  06 8E 46 08 03 5E 0A 8B   ..n....^ ..F..^..
63B0:  76 F6 26 8A 00 2A E4 2B  C1 01 46 F8 E9 B2 FF 8B   v.&..*.+ ..F.....
63C0:  46 F8 89 46 FC 8B 46 16  89 46 F2 E9 03 00 FF 46   F..F..F. .F.....F
63D0:  F2 8B 46 F2 39 46 EC 7D  03 E9 F0 00 8B 46 F2 39   ..F.9F.} .....F.9
63E0:  46 16 75 03 E9 5B 00 8B  46 F6 2B 46 0A 89 46 F0   F.u..[.. F.+F..F.
63F0:  E9 03 00 FF 46 F0 8B 46  0A 03 46 F6 3B 46 F0 7D   ....F..F ..F.;F.}
6400:  03 E9 3E 00 8B 46 F2 2B  46 0A B9 3C 00 F7 E9 8B   ..>..F.+ F..<....
6410:  D0 8B 46 0A 03 46 F2 8B  DA F7 E9 8B D3 C4 5E 06   ..F..F.. ......^.
6420:  03 D8 8B 76 F0 26 8A 00  2A E4 C4 5E 06 03 DA 83   ...v.&.. *..^....
6430:  EB 3C 8B 76 F0 26 8A 10  2A F6 2B C2 01 46 F8 E9   .<.v.&.. *.+..F..
6440:  B1 FF 8B 46 FA 39 46 F8  7F 03 E9 21 00 8B 46 F8   ...F.9F. ...!..F.
6450:  89 46 FA 8B 46 F6 89 46  EA C4 5E 0C 26 89 07 8B   .F..F..F ..^.&...
6460:  46 F2 89 46 FE C4 5E 10  26 89 07 E9 5B 00 8B 46   F..F..^. &...[..F
6470:  FA 39 46 F8 74 03 E9 50  00 8B 46 F6 2B 46 EA 50   .9F.t..P ..F.+F.P
6480:  9A EA 29 E5 0A 83 C4 02  3B 46 0A 7E 03 E9 39 00   ..)..... ;F.~..9.
6490:  8B 46 F2 2B 46 FE 50 9A  EA 29 E5 0A 83 C4 02 3B   .F.+F.P. .).....;
64A0:  46 0A 7E 03 E9 22 00 8B  46 EA 03 46 F6 99 2B C2   F.~..".. F..F..+.
64B0:  D1 F8 C4 5E 0C 26 89 07  8B 46 FE 03 46 F2 99 2B   ...^.&.. .F..F..+
64C0:  C2 D1 F8 C4 5E 10 26 89  07 E9 02 FF E9 77 FE 83   ....^.&. .....w..
64D0:  7E FA 00 7F 03 E9 32 00  C4 5E 0C 26 8B 07 8E 06   ~.....2. .^.&....
64E0:  EA 0A 26 2B 06 60 EF F7  2E 18 01 C4 5E 0C 26 89   ..&+.`.. ....^.&.
64F0:  07 C4 5E 10 26 8B 07 8E  06 EC 0A 26 2B 06 EA EF   ..^.&... ...&+...
```

```
6500:  F7 2E 18 01 C4 5E 10 26  89 07 8B 46 FA E9 00 00   .....^.& ...F....
6510:  5E 5F 8B E5 5D CB 55 8B  EC 81 EC 10 00 57 56 8E   ^_..].U. .....WV.
6520:  06 EE 0A 26 A1 5C 00 99  F7 3E 18 01 89 46 FE 8E   ...&.\.. .>...F..
6530:  06 F0 0A 26 A1 5E 00 99  F7 3E 18 01 89 46 FC 8B   ...&.^.. .>...F..
6540:  46 06 99 F7 3E 18 01 89  46 F8 8B 46 08 99 F7 3E   F...>... F..F...>
6550:  18 01 89 46 F4 FF 76 F8  9A EA 29 E5 0A 83 C4 02   ...F..v. ..).....
6560:  8B 4E FE 2B 4E 0A 3B C1  7E 03 E9 18 00 FF 76 F4   .N.+N.;. ~.....v.
6570:  9A EA 29 E5 0A 83 C4 02  8B 4E FC 2B 4E 0A 3B C1   ..)..... .N.+N.;.
6580:  7F 03 E9 06 00 B8 00 00  E9 7F 00 8E 06 EA 0A 26   ........ .......&
6590:  A1 60 EF 01 46 F8 8E 06  EC 0A 26 A1 EA EF 01 46   .`..F... ..&....F
65A0:  F4 8B 46 0A 03 46 F8 89  46 F2 8B 46 0A 03 46 F4   ..F..F.. F..F..F.
65B0:  89 46 F0 8B 46 F8 2B 46  0A 89 46 FA E9 03 00 FF   .F..F.+F ..F.....
65C0:  46 FA 8B 46 FA 39 46 F2  7F 03 E9 37 00 8B 46 F4   F..F.9F. ...7..F.
65D0:  2B 46 0A 89 46 F6 E9 03  00 FF 46 F6 8B 46 F6 39   +F..F... ..F..F.9
65E0:  46 F0 7F 03 E9 1A 00 B8  3C 00 F7 6E F6 8B D8 03   F....... <..n....
65F0:  5E FA 8E 06 FC 0A 8A 46  0C 26 00 87 00 00 E9 D8   ^......F .&......
6600:  FF E9 BB FF B8 01 00 E9  00 00 5E 5F 8B E5 5D CB   ........ ..^_..].
6610:  55 8B EC 81 EC 02 00 57  56 B8 1A 00 8E 06 E6 0A   U......W V.......
6620:  26 F7 2E 16 66 8B D8 8E  06 F8 0A 8B 46 0A 26 89   &...f... ....F.&.
6630:  87 A2 72 B8 1A 00 8E 06  E6 0A 26 F7 2E 16 66 8B   ..r..... ..&...f.
6640:  D8 8E 06 F8 0A 8B 46 0C  26 89 87 A4 72 8E 06 E6   ......F. &...r...
6650:  0A 26 FF 06 16 66 B8 1A  00 26 F7 2E 16 66 8B D8   .&...f.. .&...f..
6660:  8E 06 F8 0A 8B 46 06 26  89 87 A2 72 B8 1A 00 8E   .....F.& ...r....
6670:  06 E6 0A 26 F7 2E 16 66  8B D8 8E 06 F8 0A 8B 46   ...&...f .......F
6680:  08 26 89 87 A4 72 B8 1A  00 F7 6E 0C 8B D8 8E 06   .&...r.. ..n.....
6690:  F4 0A 26 FF B7 18 02 B8  1A 00 F7 6E 0C 8B D8 26   ..&..... ...n...&
66A0:  FF B7 16 02 B8 1A 00 F7  6E 0A 8B D8 26 FF B7 18   ........ n...&...
66B0:  02 B8 1A 00 F7 6E 0A 8B  D8 26 FF B7 16 02 B8 1A   .....n.. .&......
66C0:  00 F7 6E 08 8B D8 8E 06  F2 0A 26 FF B7 62 8B B8   ..n..... ..&..b..
66D0:  1A 00 F7 6E 08 8B D8 26  FF B7 60 8B B8 1A 00 F7   ...n...& ..`.....
66E0:  6E 06 8B D8 26 FF B7 62  8B B8 1A 00 F7 6E 06 8B   n...&..b .....n..
66F0:  D8 26 FF B7 60 8B 9A 8A  01 73 08 83 C4 10 50 9A   .&..`... .s....P.
6700:  EA 29 E5 0A 83 C4 02 89  46 FE B8 1A 00 8E 06 E6   .)...... F.......
6710:  0A 26 F7 2E 16 66 8B D8  8E 06 F8 0A 8B 46 FE 26   .&...f.. .....F.&
6720:  89 87 B6 72 B8 1A 00 F7  6E 06 8B D8 8E 06 F2 0A   ...r.... n.......
6730:  26 8B 87 60 8B 8B C8 B8  1A 00 F7 6E 0A 8B D8 8E   &..`.... ...n....
6740:  06 F4 0A 26 2B 8F 16 02  B8 1A 00 8E 06 E6 0A 26   ...&+... .......&
6750:  F7 2E 16 66 8B D8 8E 06  F8 0A 26 89 8F AA 72 B8   ...f.... ..&...r.
6760:  1A 00 F7 6E 08 8B D8 8E  06 F2 0A 26 8B 87 60 8B   ...n.... ...&..`.
6770:  8B C8 B8 1A 00 F7 6E 0C  8B D8 8E 06 F4 0A 26 2B   ......n. ......&+
6780:  8F 16 02 B8 1A 00 8E 06  E6 0A 26 F7 2E 16 66 8B   ........ ..&...f.
6790:  D8 8E 06 F8 0A 26 89 8F  AC 72 B8 1A 00 F7 6E 06   .....&.. .r....n.
67A0:  8B D8 8E 06 F2 0A 26 8B  87 62 8B 8B C8 B8 1A 00   ......&. .b......
67B0:  F7 6E 0A 8B D8 8E 06 F4  0A 26 2B 8F 18 02 B8 1A   .n...... .&+.....
67C0:  00 8E 06 E6 0A 26 F7 2E  16 66 8B D8 8E 06 F8 0A   .....&.. .f......
67D0:  26 89 8F AE 72 B8 1A 00  F7 6E 08 8B D8 8E 06 F2   &...r... .n......
67E0:  0A 26 8B 87 62 8B 8B C8  B8 1A 00 F7 6E 0C 8B D8   .&..b... ....n...
67F0:  8E 06 F4 0A 26 2B 8F 18  02 B8 1A 00 8E 06 E6 0A   ....&+.. ........
6800:  26 F7 2E 16 66 8B D8 8E  06 F8 0A 26 89 8F B0 72   &...f... ...&...r
6810:  B8 1A 00 F7 6E 0C 8B D8  8E 06 F4 0A B8 1A 00 F7   ....n... ........
6820:  6E 0A 8B F0 26 8B 84 18  02 26 2B 87 18 02 99 52   n...&... .&+....R
6830:  50 52 50 9A FA 2A E5 0A  8B C8 B8 1A 00 8B DA F7   PRP..*.. ........
6840:  6E 0C 8B F0 8E 06 F4 0A  B8 1A 00 F7 6E 0A 8B F8   n....... ....n...
6850:  26 8B 85 16 02 26 2B 84  16 02 99 52 50 52 50 8B   &....&+. ...RPRP.
```

```
6860:  F1 8B FB 9A FA 2A E5 0A  03 F0 13 FA 57 56 9A 3A   .....*.. ....WV.:
6870:  01 42 08 83 C4 04 8B C8  B8 1A 00 8E 06 E6 0A 26   .B...... .......&
6880:  F7 2E 16 66 8B D8 8E 06  F8 0A 26 89 8F BA 72 B8   ...f.... ..&...r.
6890:  1A 00 8E 06 E6 0A 26 F7  2E 16 66 8B D8 8E 06 F8   ......&. ..f.....
68A0:  0A 8B 46 0E 26 89 87 B8  72 B8 1A 00 8E 06 E6 0A   ..F.&... r.......
68B0:  26 F7 2E 16 66 8B D8 8E  06 F8 0A 26 C7 87 B2 72   &...f... ...&...r
68C0:  00 00 B8 1A 00 8E 06 E6  0A 26 F7 2E 16 66 8B D8   ........ .&...f..
68D0:  8E 06 F8 0A 26 C7 87 B4  72 00 00 8E 06 E6 0A 26   ....&... r......&
68E0:  FF 06 16 66 B8 1A 00 26  F7 2E 16 66 8B D8 8E 06   ...f...& ...f....
68F0:  F8 0A 26 C7 87 A2 72 FF  FF 8E 06 E6 0A 26 FF 06   ..&...r. .....&..
6900:  16 66 8E 06 E8 0A 26 FF  06 EC EF 5E 5F 8B E5 5D   .f....&. ...^_..]
6910:  CB 55 8B EC 81 EC 00 00  57 56 FF 76 06 9A EA 29   .U...... WV.v...)
6920:  E5 0A 83 C4 02 8E 06 EE  0A 26 3B 06 5C 00 7C 03   ........ .&;.\.|.
6930:  E9 7F 00 FF 76 08 9A EA  29 E5 0A 83 C4 02 8E 06   ....v... ).......
6940:  F0 0A 26 3B 06 5E 00 7C  03 E9 66 00 8B 46 08 99   ..&;.^.| ..f..F..
6950:  F7 3E 18 01 8E 06 EC 0A  26 03 06 EA EF 8B C8 D1   .>...... &.......
6960:  E0 D1 E0 03 C1 D1 E0 05  05 00 B9 0A 00 99 F7 F9   ........ ........
6970:  BB 3C 00 F7 EB 8B D8 8B  46 06 99 F7 3E 18 01 8E   .<...... F...>...
6980:  06 EA 0A 26 03 06 60 EF  8B D0 D1 E0 D1 E0 03 C2   ...&..`. ........
6990:  D1 E0 05 05 00 99 F7 F9  03 D8 8E 06 FC 0A 8A 46   ........ .......F
69A0:  0A 26 00 87 00 00 8B 46  0A 8E 06 E4 0A 26 01 06   .&.....F .....&..
69B0:  54 89 5E 5F 8B E5 5D CB  55 8B EC 81 EC 08 00 57   T.^_..]. U......W
69C0:  56 B8 1A 01 1E 50 B8 1D  01 1E 50 9A 30 07 E5 0A   V....P.. ..P.0...
69D0:  83 C4 08 89 46 F8 89 56  FA C7 46 FC 00 00 E9 03   ....F..V ..F.....
69E0:  00 FF 46 FC A1 12 0C 39  46 FC 7C 03 E9 59 00 C7   ..F....9 F.|..Y..
69F0:  46 FE 00 00 E9 03 00 FF  46 FE A1 10 0C 39 46 FE   F....... F....9F.
6A00:  7C 03 E9 2D 00 B8 3C 00  F7 6E FC 8B D8 03 5E FE   |..-..<. .n....^.
6A10:  8E 06 FC 0A 26 8A 87 00  00 2A E4 50 B8 27 01 1E   ....&... .*.P.'..
6A20:  50 FF 76 FA FF 76 F8 9A  4C 07 E5 0A 83 C4 0A E9   P.v..v.. L.......
6A30:  C5 FF B8 2C 01 1E 50 FF  76 FA FF 76 F8 9A 4C 07   ...,..P. v..v..L.
6A40:  E5 0A 83 C4 08 E9 99 FF  FF 76 FA FF 76 F8 9A 36   ........ .v..v..6
6A50:  06 E5 0A 83 C4 04 5E 5F  8B E5 5D CB 55 8B EC 81   ......^_ ..].U...
6A60:  EC 00 00 57 56 8B 46 06  8E 06 FE 0A 26 A3 4A 00   ...WV.F. ....&.J.
6A70:  5E 5F 8B E5 5D CB 55 8B  EC 81 EC 00 00 57 56 8E   ^_..].U. .....WV.
6A80:  06 00 0B 26 83 3E 7C 01  00 75 03 E9 09 00 A1 30   ...&.>|. .u.....0
6A90:  01 E9 09 00 E9 06 00 A1  2E 01 E9 00 00 5E 5F 8B   ........ .....^_.
6AA0:  E5 5D CB 55 8B EC 81 EC  74 00 57 56 8D 7E F4 BE   .].U.... t.WV.~..
6AB0:  42 01 8C D0 8E C0 B9 05  00 F3 A5 A4 B8 4D 01 1E   B....... .....M..
6AC0:  50 8D 46 F4 16 50 9A 30  07 E5 0A 83 C4 08 89 46   P.F..P.0 .......F
6AD0:  F0 89 56 F2 0B D0 75 03  E9 08 01 FF 76 F2 FF 76   ..V...u. ....v..v
6AE0:  F0 B8 64 00 50 8D 4E 8C  16 51 9A 6A 26 E5 0A 83   ..d.P.N. .Q.j&...
6AF0:  C4 0A B8 30 01 1E 50 B8  2E 01 1E 50 B8 50 01 1E   ...0..P. ...P.P..
6B00:  50 8D 46 8C 16 50 9A B2  27 E5 0A 83 C4 10 FF 76   P.F..P.. '......v
6B10:  F2 FF 76 F0 B8 64 00 50  8D 4E 8C 16 51 9A 6A 26   ..v..d.P .N..Q.j&
6B20:  E5 0A 83 C4 0A B8 36 01  1E 50 B8 58 01 1E 50 8D   ......6. .P.X..P.
6B30:  46 8C 16 50 9A B2 27 E5  0A 83 C4 0C FF 76 F2 FF   F..P..'. .....v..
6B40:  76 F0 B8 64 00 50 8D 4E  8C 16 51 9A 6A 26 E5 0A   v..d.P.N ..Q.j&..
6B50:  83 C4 0A B8 34 01 1E 50  B8 32 01 1E 50 B8 5D 01   ....4..P .2..P.].
6B60:  1E 50 8D 46 8C 16 50 9A  B2 27 E5 0A 83 C4 10 FF   .P.F..P. .'......
6B70:  76 F2 FF 76 F0 B8 64 00  50 8D 4E 8C 16 51 9A 6A   v..v..d. P.N..Q.j
6B80:  26 E5 0A 83 C4 0A B8 3A  01 1E 50 B8 38 01 1E 50   &......: ..P.8..P
6B90:  B8 65 01 1E 50 8D 46 8C  16 50 9A B2 27 E5 0A 83   .e..P.F. .P..'...
6BA0:  C4 10 FF 76 F2 FF 76 F0  B8 64 00 50 8D 46 8C 16   ...v..v. .d.P.F..
6BB0:  50 9A 6A 26 E5 0A 83 C4  0A B8 3E 01 1E 50 B8 3C   P.j&.... ..>..P.<
```

```
6BC0:  01 1E 50 B8 6D 01 1E 50  8D 46 8C 16 50 9A B2 27   ..P.m..P .F..P..'
6BD0:  E5 0A 83 C4 10 FF 76 F2  FF 76 F0 9A 36 06 E5 0A   ......v. .v..6...
6BE0:  83 C4 04 5E 5F 8B E5 5D  CB 55 8B EC 81 EC 00 00   ...^_..] .U......
6BF0:  57 56 83 7E 06 06 7E 03  E9 18 00 8E 06 FE 0A 26   WV.~..~. .......&
6C00:  83 3E 4A 00 01 74 03 E9  12 00 83 7E 06 05 7F 03   .>J..t.. ...~....
6C10:  E9 09 00 B8 01 00 E9 09  00 E9 06 00 B8 00 00 E9   ........ ........
6C20:  00 00 5E 5F 8B E5 5D CB  55 8B EC 81 EC 00 00 57   ..^_..]. U......W
6C30:  56 9A D5 12 85 06 B8 00  00 E9 81 00 8E 06 FE 0A   V....... ........
6C40:  26 83 3E 4A 00 01 75 03  E9 72 00 B8 E8 03 BA 00   &.>J..u. .r......
6C50:  00 52 50 B8 17 0B BA 00  00 52 50 8E 06 02 0B 26   .RP..... .RP....&
6C60:  FF 36 68 EF 26 FF 36 66  EF 9A FA 2A E5 0A B9 2F   .6h.&.6f ...*.../
6C70:  13 BB 00 00 53 51 8E 06  02 0B 26 FF 36 80 EF 26   ....SQ.. ..&.6..&
6C80:  FF 36 7E EF 8B F0 8B FA  9A FA 2A E5 0A 03 F0 13   .6~..... ..*.....
6C90:  FA 81 EE 50 3F 83 DF 16  57 56 9A 60 2A E5 0A 8E   ...P?... WV.`*...
6CA0:  06 04 0B 26 A3 9E 89 26  81 3E 9E 89 A4 06 7F 03   ...&...& .>......
6CB0:  E9 0A 00 B8 FF FF 26 A3  A6 89 E9 00 00 5E 5F 8B   ......&. .....^_.
6CC0:  E5 5D CB 55 8B EC 81 EC  20 00 57 56 8E 06 04 0B   .].U....  .WV....
6CD0:  26 C7 06 A6 89 00 00 26  83 3E 62 89 01 7C 03 E9   &......& .>b..|..
6CE0:  0D 00 26 C7 06 A6 89 FF  FF B8 FF FF E9 62 02 B8   ..&..... .....b..
6CF0:  E8 03 BA 00 00 52 50 B8  97 7D BA 02 00 52 50 8E   .....RP. .}...RP.
6D00:  06 04 0B 26 A1 60 89 99  52 50 9A FA 2A E5 0A 8E   ...&.`.. RP..*...
6D10:  06 04 0B 8B C8 B8 E9 30  8B DA 26 F7 2E 5C 89 03   .......0 ..&..\..
6D20:  C1 13 D3 2D 07 6F 83 DA  1B 52 50 9A 60 2A E5 0A   ...-.o.. .RP.`*..
6D30:  8E 06 04 0B 26 A3 9E 89  8E 06 FE 0A 26 83 3E 4A   ....&... ....&.>J
6D40:  00 01 74 03 E9 06 00 B8  00 00 E9 04 02 8E 06 04   ..t..... ........
6D50:  0B 26 A1 9E 89 8E 06 06  0B 26 2B 06 6A 00 8E 06   .&...... .&+.j...
6D60:  02 0B 26 A3 D4 EF 8E 06  06 0B 26 A1 6A 00 99 05   ..&..... ..&.j...
6D70:  88 13 83 D2 00 52 50 8E  06 02 0B B8 E8 03 26 F7   .....RP. ......&.
6D80:  2E D4 EF 52 50 9A 60 2A  E5 0A 99 89 46 FC 89 56   ...RP.`* ....F..V
6D90:  FE 8E 06 06 0B 26 A1 6A  00 99 05 88 13 83 D2 00   .....&.j ........
6DA0:  52 50 8E 06 02 0B 26 FF  36 D4 EF 9A EA 29 E5 0A   RP....&. 6....)..
6DB0:  83 C4 02 B9 E8 03 F7 E9  52 50 9A 60 2A E5 0A 99   ........ RP.`*...
6DC0:  89 46 F8 89 56 FA 8E 06  06 0B 26 83 3E 76 00 00   .F..V... ..&.>v..
6DD0:  74 03 E9 0F 00 8E 06 02  0B 26 A1 D4 EF 26 A3 E0   t....... .&...&..
6DE0:  EF E9 31 00 8E 06 06 0B  26 A1 76 00 3D 01 00 7C   ..1..... &.v.=..|
6DF0:  03 E9 03 00 B8 01 00 99  52 50 8E 06 02 0B B8 E8   ........ RP......
6E00:  03 26 F7 2E D4 EF 52 50  9A 60 2A E5 0A 8E 06 02   .&....RP .`*.....
6E10:  0B 26 A3 E0 EF B8 E8 03  BA 00 00 52 50 B8 2A 4B   .&...... ...RP.*K
6E20:  BA 05 00 52 50 8E 06 04  0B 26 A1 62 89 99 52 50   ...RP... .&.b..RP
6E30:  9A FA 2A E5 0A B9 2B 10  BB 00 00 53 51 8E 06 02   ..*...+. ...SQ...
6E40:  0B 26 FF 36 A4 EF 26 FF  36 A2 EF 8B F0 8B FA 9A   .&.6..&. 6.......
6E50:  FA 2A E5 0A B9 BA 84 BB  01 00 53 51 8E 06 04 0B   .*...... ..SQ....
6E60:  8B C8 26 A1 52 89 8B DA  99 52 50 89 4E F4 89 5E   ..&.R... .RP.N..^
6E70:  F6 9A FA 2A E5 0A B9 2E  D6 BB 00 00 53 51 8E 06   ...*.... ....SQ..
6E80:  04 0B 8B C8 26 A1 5A 89  8B DA 99 52 50 89 4E F0   ....&.Z. ...RP.N.
6E90:  89 5E F2 9A FA 2A E5 0A  8E 06 04 0B 8B C8 B8 E6   .^...*.. ........
6EA0:  0C 8B DA 26 F7 2E 56 89  89 46 EC 89 56 EE B8 51   ...&..V. .F..V..Q
6EB0:  ED 26 F7 2E 5E 89 2B 46  EC 1B 56 EE 89 46 E8 89   .&..^.+F ..V..F..
6EC0:  56 EA B8 98 1A 26 F7 2E  58 89 89 46 E4 89 56 E6   V....&.. X..F..V.
6ED0:  B8 27 60 26 F7 2E 60 89  89 46 E0 89 56 E2 8B 46   .'`&..`. .F..V..F
6EE0:  E8 8B 56 EA 2B 46 E4 1B  56 E6 03 C8 13 DA 03 4E   ..V.+F.. V......N
6EF0:  F0 13 5E F2 03 4E F4 13  5E F6 03 4E E0 13 5E E2   ..^..N.. ^..N..^.
6F00:  03 F1 13 FB 81 EE 23 5B  83 DF 2B 57 56 9A 60 2A   ......#[ ..+WV.`*
6F10:  E5 0A 8E 06 04 0B 26 A3  9E 89 A1 34 01 26 39 06   ......&. ...4.&9.
```

MATCH.DMP Thursday, January 6, 1994 12:04pm Page 34

```
6F20:  9E 89 7F 03 E9 07 00 26  C7 06 A6 89 01 00 8E 06   .......& ........
6F30:  04 0B A1 32 01 26 39 06  9E 89 7C 03 E9 07 00 26   ...2.&9. ..|....&
6F40:  C7 06 A6 89 FF FF 8E 06  04 0B 26 A1 A6 89 E9 00   ........ ..&.....
6F50:  00 5E 5F 8B E5 5D CB 55  8B EC 81 EC 0C 00 57 56   .^_..].U ......WV
6F60:  B8 00 00 8E 06 02 0B 26  A3 D6 EF 8E 06 04 0B 26   .......& .......&
6F70:  A3 A0 89 B8 E8 03 BA 00  00 52 50 B8 B3 15 BA 00   ........ .RP.....
6F80:  00 52 50 8E 06 02 0B 26  FF 36 A8 EF 26 FF 36 A6   .RP....& .6..&.6.
6F90:  EF 9A FA 2A E5 0A B9 25  09 BB 00 00 53 51 8E 06   ...*...% ....SQ..
6FA0:  02 0B 26 FF 36 A4 EF 26  FF 36 A2 EF 8B F0 8B FA   ..&.6..& .6......
6FB0:  9A FA 2A E5 0A B9 49 98  BB 00 00 53 51 8E 06 04   ..*...I. ...SQ...
6FC0:  0B 8B C8 26 A1 5A 89 8B  DA 99 52 50 89 4E FC 89   ...&.Z.. ..RP.N..
6FD0:  5E FE 9A FA 2A E5 0A B9  75 24 BB 08 00 53 51 8E   ^...*... u$...SQ.
6FE0:  06 04 0B 8B C8 26 A1 62  89 8B DA 99 52 50 89 4E   .....&.b ....RP.N
6FF0:  F8 89 5E FA 9A FA 2A E5  0A 8E 06 04 0B 8B C8 B8   ..^...*. ........
7000:  69 09 8B DA 26 F7 2E 5E  89 89 46 F4 89 56 F6 B8   i...&..^ ..F..V..
7010:  77 F1 26 F7 2E 58 89 2B  46 F4 1B 56 F6 03 C8 13   w.&..X.+ F..V....
7020:  DA 03 4E F8 13 5E FA 03  4E FC 13 5E FE 03 F1 13   ..N..^.. N..^....
7030:  FB 81 EE 43 5E 83 DF 34  57 56 9A 60 2A E5 0A 8E   ...C^..4 WV.`*...
7040:  06 04 0B 26 A3 A2 89 8E  06 FE 0A 26 83 3E 4A 00   ...&.... ...&.>J.
7050:  01 74 03 E9 3C 00 8E 06  04 0B 26 A1 A2 89 26 A3   .t..<... ..&...&.
7060:  9C 89 A1 2E 01 26 39 06  9C 89 7F 03 E9 0A 00 26   .....&9. .......&
7070:  C7 06 A6 89 02 00 E9 0B  00 8E 06 04 0B 26 C7 06   ........ .....&..
7080:  A6 89 FE FF 8E 06 04 0B  26 A1 A6 89 E9 56 01 E9   ........ &....V..
7090:  53 01 8E 06 04 0B 26 A1  A2 89 8E 06 06 0B 26 2B   S.....&. ......&+
70A0:  06 6E 00 8E 06 02 0B 26  A3 D8 EF 8E 06 06 0B 26   .n.....& .......&
70B0:  83 3E 7A 00 00 74 03 E9  0F 00 8E 06 02 0B 26 A1   .>z..t.. ......&.
70C0:  D8 EF 26 A3 E4 EF E9 31  00 8E 06 06 0B 26 A1 78   ..&....1 .....&.x
70D0:  00 3D 01 00 7C 03 E9 03  00 B8 01 00 99 52 50 8E   .=..|... .....RP.
70E0:  06 02 0B B8 E8 03 26 F7  2E D8 EF 52 50 9A 60 2A   ......&. ...RP.`*
70F0:  E5 0A 8E 06 02 0B 26 A3  E4 EF B8 E8 03 BA 00 00   ......&. ........
7100:  52 50 B8 F0 15 BA 00 00  52 50 8E 06 02 0B 26 FF   RP...... RP....&.
7110:  36 A4 EF 26 FF 36 A2 EF  9A FA 2A E5 0A B9 08 E3   6..&.6.. ..*.....
7120:  BB 03 00 53 51 8E 06 04  0B 8B C8 26 A1 52 89 8B   ...SQ... ...&.R..
7130:  DA 99 52 50 8B F1 8B FB  9A FA 2A E5 0A B9 E9 CA   ..RP.... ..*.....
7140:  BB 01 00 53 51 8E 06 04  0B 8B C8 26 A1 66 89 8B   ...SQ... ...&.f..
7150:  DA 99 52 50 89 4E F4 89  5E F6 9A FA 2A E5 0A 8E   ..RP.N.. ^...*...
7160:  06 04 0B 8B C8 B8 38 6D  8B DA 26 F7 2E 5C 89 03   ......8m ..&..\..
7170:  C1 13 D3 03 46 F4 13 56  F6 8B C8 B8 FA 3D 8B DA   ....F..V .....=..
7180:  26 F7 2E 5E 89 2B C8 1B  DA 03 F1 13 FB 81 EE D9   &..^.+.. ........
7190:  C2 83 DF 36 57 56 9A 60  2A E5 0A 8E 06 04 0B 26   ...6WV.` *......&
71A0:  A3 A2 89 26 83 3E A6 89  00 74 03 E9 2C 00 A1 3A   ...&.>.. .t..,..:
71B0:  01 26 39 06 A2 89 7F 03  E9 07 00 26 C7 06 A6 89   .&9..... ...&....
71C0:  02 00 8E 06 04 0B A1 38  01 26 39 06 A2 89 7E 03   .......8 .&9...~.
71D0:  E9 07 00 26 C7 06 A6 89  FE FF 8E 06 04 0B 26 A1   ...&.... ......&.
71E0:  A6 89 E9 00 00 5E 5F 8B  E5 5D CB 55 8B EC 81 EC   .....^_. .].U....
71F0:  1E 00 57 56 B8 E8 03 BA  00 00 52 50 B8 3A 23 BA   ..WV.... ..RP.:#.
7200:  00 00 52 50 8E 06 02 0B  26 FF 36 A8 EF 26 FF 36   ..RP.... &.6..&.6
7210:  A6 EF 9A FA 2A E5 0A 8E  06 04 0B 8B C8 B8 FE 5D   ....*... .......]
7220:  8B DA 26 F7 2E 60 89 03  C8 13 DA 81 E9 30 A9 83   ..&..`.. .....0..
7230:  DB 2F 53 51 9A 60 2A E5  0A 8E 06 04 0B 26 A3 A4   ./SQ.`*. .....&..
7240:  89 8E 06 FE 0A 26 83 3E  4A 00 01 74 03 E9 0B 00   .....&.> J..t....
7250:  8E 06 04 0B 26 A1 A6 89  E9 D9 02 8E 06 06 0B 26   ....&... .......&
7260:  A1 6E 00 99 05 88 13 83  D2 00 52 50 8E 06 02 0B   .n...... ..RP....
7270:  B8 E8 03 26 F7 2E D8 EF  52 50 9A F8 29 E5 0A 83   ...&.... RP..)...
```

```
7280:  C4 04 52 50 9A 60 2A E5  0A 99 89 46 F2 89 56 F4   ..RP.`*. ...F..V.
7290:  8E 06 04 0B 26 A1 A4 89  8E 06 06 0B 26 2B 06 70   ....&... ....&+.p
72A0:  00 8E 06 02 0B 26 A3 DA  EF 8E 06 06 0B 26 A1 70   .....&.. .....&.p
72B0:  00 99 05 88 13 83 D2 00  52 50 8E 06 02 0B B8 E8   ........ RP......
72C0:  03 26 F7 2E DA EF 52 50  9A 60 2A E5 0A 99 89 46   .&....RP .`*....F
72D0:  F6 89 56 F8 8E 06 06 0B  26 A1 62 00 8E 06 08 0B   ..V..... &.b.....
72E0:  26 2B 06 30 00 99 52 50  B8 E8 03 BA 00 00 52 50   &+.0..RP ......RP
72F0:  8E 06 02 0B 26 FF 36 A8  EF 26 FF 36 A6 EF 9A FA   ....&.6. .&.6....
7300:  2A E5 0A 52 50 9A 60 2A  E5 0A 89 46 FA 89 56 FC   *..RP.`* ...F..V.
7310:  8E 06 06 0B 26 83 3E 7C  00 00 74 03 E9 0F 00 8E   ....&.>| ..t.....
7320:  06 02 0B 26 A1 DA EF 26  A3 E6 EF E9 31 00 8E 06   ...&...& ....1...
7330:  06 0B 26 A1 7C 00 3D 01  00 7C 03 E9 03 00 B8 01   ..&.|.=. .|......
7340:  00 99 52 50 8E 06 02 0B  B8 E8 03 26 F7 2E DA EF   ..RP.... ...&....
7350:  52 50 9A 60 2A E5 0A 8E  06 02 0B 26 A3 E6 EF B8   RP.`*... ...&....
7360:  E8 03 BA 00 00 52 50 B8  E5 17 BA 00 00 52 50 FF   .....RP. .....RP.
7370:  76 F4 FF 76 F2 9A FA 2A  E5 0A B9 4B 1B BB 00 00   v..v...* ...K....
7380:  53 51 8E 06 02 0B 26 FF  36 A4 EF 26 FF 36 A2 EF   SQ....&. 6..&.6..
7390:  8B F0 8B FA 9A FA 2A E5  0A B9 31 02 BB 00 00 53   ......*. ..1....S
73A0:  51 8E 06 02 0B 26 FF 36  AC EF 26 FF 36 AA EF 89   Q....&.6 ..&.6...
73B0:  46 EE 89 56 F0 9A FA 2A  E5 0A B9 BE AA BB 07 00   F..V...* ........
73C0:  53 51 8E 06 04 0B 8B C8  26 A1 52 89 8B DA 99 52   SQ...... &.R....R
73D0:  50 89 4E EA 89 5E EC 9A  FA 2A E5 0A B9 57 7C BB   P.N..^.. .*...W|.
73E0:  01 00 53 51 8E 06 04 0B  8B C8 26 A1 78 89 8B DA   ..SQ.... ..&.x...
73F0:  99 52 50 89 4E E6 89 5E  E8 9A FA 2A E5 0A B9 A9   .RP.N..^ ...*....
7400:  C2 BB 00 00 53 51 8E 06  04 0B 8B C8 26 A1 5E 89   ....SQ.. ....&.^.
7410:  8B DA 99 52 50 89 4E E2  89 5E E4 9A FA 2A E5 0A   ...RP.N. .^...*..
7420:  8E 06 06 0B 8B C8 B8 DF  24 8B DA 26 F7 2E 84 00   ........ $..&....
7430:  2B C1 1B D3 8E 06 04 0B  8B C8 B8 B8 35 8B DA 26   +....... ....5..&
7440:  F7 2E 58 89 03 C1 13 D3  03 46 E2 13 56 E4 03 46   ..X..... .F..V..F
7450:  E6 13 56 E8 03 46 EA 13  56 EC 03 46 EE 13 56 F0   ..V..F.. V..F..V.
7460:  2B C6 1B D7 2D 4E 96 83  DA 3A 52 50 9A 60 2A E5   +...-N.. .:RP.`*.
7470:  0A 8E 06 04 0B 26 A3 A4  89 26 83 3E A6 89 00 74   .....&.. .&.>...t
7480:  03 E9 22 00 A1 3C 01 26  39 06 A4 89 7F 03 E9 0A   .."..<.& 9.......
7490:  00 26 C7 06 A6 89 03 00  E9 0B 00 8E 06 04 0B 26   .&...... .......&
74A0:  C7 06 A6 89 FD FF 83 3E  40 01 01 74 03 E9 60 00   .......> @..t..`.
74B0:  8E 06 04 0B 26 83 3E 80  89 00 7F 03 E9 51 00 C7   ....&.>. .....Q..
74C0:  46 FE 00 00 A1 3E 01 26  39 06 8C 89 7F 03 E9 03   F....>.& 9.......
74D0:  00 FF 46 FE 8E 06 04 0B  A1 3E 01 26 39 06 98 89   ..F..... .>.&9...
74E0:  7F 03 E9 03 00 FF 46 FE  8E 06 04 0B A1 3E 01 26   ......F. .....>.&
74F0:  39 06 A4 89 7F 03 E9 03  00 FF 46 FE 83 7E FE 02   9....... ..F..~..
7500:  7D 03 E9 0B 00 8E 06 04  0B 26 C7 06 A6 89 03 00   }....... .&......
7510:  8E 06 04 0B 26 A1 A6 89  8E 06 06 0B 26 2B 06 72   ....&... ....&+.r
7520:  00 8E 06 02 0B 26 A3 DC  EF 8E 06 04 0B 26 A1 A6   .....&.. .....&..
7530:  89 E9 00 00 5E 5F 8B E5  5D CB 55 8B EC 81 EC 1E   ....^_.. ].U.....
7540:  00 57 56 8E 06 04 0B 26  C7 06 A6 89 00 00 26 83   .WV....& ......&.
7550:  3E 62 89 01 7C 03 E9 0D  00 26 C7 06 A6 89 FF FF   >b..|... .&......
7560:  B8 FF FF E9 B9 07 B8 00  00 8E 06 02 0B 26 A3 D6   ........ .....&..
7570:  EF 8E 06 04 0B 26 A3 A0  89 B8 E8 03 BA 00 00 52   .....&.. .......R
7580:  50 B8 B3 15 BA 00 00 52  50 8E 06 02 0B 26 FF 36   P......R P....&.6
7590:  A8 EF 26 FF 36 A6 EF 9A  FA 2A E5 0A B9 25 09 BB   ..&.6... .*...%..
75A0:  00 00 53 51 8E 06 02 0B  26 FF 36 A4 EF 26 FF 36   ..SQ.... &.6..&.6
75B0:  A2 EF 8B F0 8B FA 9A FA  2A E5 0A B9 49 98 BB 00   ........ *...I...
75C0:  00 53 51 8E 06 04 0B 8B  C8 26 A1 5A 89 8B DA 99   .SQ..... .&.Z....
75D0:  52 50 89 4E EE 89 5E F0  9A FA 2A E5 0A B9 75 24   RP.N..^. ..*...u$
```

```
75E0:  BB 08 00 53 51 8E 06 04  0B 8B C8 26 A1 62 89 8B   ...SQ... ...&.b..
75F0:  DA 99 52 50 89 4E EA 89  5E EC 9A FA 2A E5 0A 8E   ..RP.N.. ^...*...
7600:  06 04 0B 8B C8 B8 69 09  8B DA 26 F7 2E 5E 89 89   ......i. ..&..^..
7610:  46 E6 89 56 E8 B8 77 F1  26 F7 2E 58 89 2B 46 E6   F..V..w. &..X.+F.
7620:  1B 56 E8 03 C8 13 DA 03  4E EA 13 5E EC 03 4E EE   .V...... N..^..N.
7630:  13 5E F0 03 F1 13 FB 81  EE 43 5E 83 DF 34 57 56   .^...... .C^..4WV
7640:  9A 60 2A E5 0A 8E 06 04  0B 26 A3 A2 89 8E 06 FE   .`*..... .&......
7650:  0A 26 83 3E 4A 00 01 74  03 E9 3C 00 8E 06 04 0B   .&.>J..t ..<.....
7660:  26 A1 A2 89 26 A3 9C 89  A1 2E 01 26 39 06 9C 89   &...&... ...&9...
7670:  7F 03 E9 0A 00 26 C7 06  A6 89 02 00 E9 0B 00 8E   .....&.. ........
7680:  06 04 0B 26 C7 06 A6 89  FE FF 8E 06 04 0B 26 A1   ...&.... ......&.
7690:  A6 89 E9 8A 06 E9 68 00  8E 06 04 0B 26 A1 A2 89   ......h. ....&...
76A0:  8E 06 06 0B 26 2B 06 6E  00 8E 06 02 0B 26 A3 D8   ....&+.n .....&..
76B0:  EF 8E 06 06 0B 26 83 3E  7A 00 00 74 03 E9 0F 00   .....&.> z..t....
76C0:  8E 06 02 0B 26 A1 D8 EF  26 A3 E4 EF E9 31 00 8E   ....&... &....1..
76D0:  06 06 0B 26 A1 78 00 3D  01 00 7C 03 E9 03 00 B8   ...&.x.= ..|.....
76E0:  01 00 99 52 50 8E 06 02  0B B8 E8 03 26 F7 2E D8   ...RP... ....&...
76F0:  EF 52 50 9A 60 2A E5 0A  8E 06 02 0B 26 A3 E4 EF   .RP.`*.. ....&...
7700:  B8 E8 03 BA 00 00 52 50  B8 3A 23 BA 00 00 52 50   ......RP .:#...RP
7710:  8E 06 02 0B 26 FF 36 A8  EF 26 FF 36 A6 EF 9A FA   ....&.6. .&.6....
7720:  2A E5 0A 8E 06 04 0B 8B  C8 B8 FE 5D 8B DA 26 F7   *....... ...]..&.
7730:  2E 60 89 03 C8 13 DA 81  E9 30 A9 83 DB 2F 53 51   .`...... .0.../SQ
7740:  9A 60 2A E5 0A 8E 06 04  0B 26 A3 A4 89 8E 06 FE   .`*..... .&......
7750:  0A 26 83 3E 4A 00 01 74  03 E9 0B 00 8E 06 04 0B   .&.>J..t ........
7760:  26 A1 A6 89 E9 B8 05 8E  06 06 0B 26 A1 62 00 8E   &....... ...&.b..
7770:  06 08 0B 26 2B 06 30 00  99 52 50 B8 E8 03 BA 00   ...&+.0. .RP.....
7780:  00 52 50 8E 06 02 0B 26  FF 36 A8 EF 26 FF 36 A6   .RP....& .6..&.6.
7790:  EF 9A FA 2A E5 0A 52 50  9A 60 2A E5 0A 89 46 FA   ...*..RP .`*...F.
77A0:  89 56 FC 8E 06 06 0B 26  A1 6E 00 99 05 88 13 83   .V.....& .n......
77B0:  D2 00 52 50 8E 06 02 0B  B8 E8 03 26 F7 2E D8 EF   ..RP.... ...&....
77C0:  52 50 9A F8 29 E5 0A 83  C4 04 52 50 9A 60 2A E5   RP..)... ..RP.`*.
77D0:  0A 99 89 46 F2 89 56 F4  8E 06 04 0B 26 A1 A4 89   ...F..V. ....&...
77E0:  8E 06 06 0B 26 2B 06 70  00 8E 06 02 0B 26 A3 DA   ....&+.p .....&..
77F0:  EF 8E 06 06 0B 26 A1 70  00 99 05 88 13 83 D2 00   .....&.p ........
7800:  52 50 8E 06 02 0B B8 E8  03 26 F7 2E DA EF 52 50   RP...... .&....RP
7810:  9A 60 2A E5 0A 99 89 46  F6 89 56 F8 8E 06 04 0B   .`*....F ..V.....
7820:  26 83 3E 62 89 03 74 03  E9 C7 00 B8 E8 03 BA 00   &.>b..t. ........
7830:  00 52 50 B8 E9 15 BA 00  00 52 50 8E 06 02 0B 26   .RP..... .RP....&
7840:  FF 36 CC EF 26 FF 36 CA  EF 9A FA 2A E5 0A B9 7E   .6..&.6. ...*...~
7850:  03 BB 00 00 53 51 8E 06  02 0B 26 FF 36 AC EF 26   ....SQ.. ..&.6..&
7860:  FF 36 AA EF 8B F0 8B FA  9A FA 2A E5 0A B9 A7 66   .6...... ..*....f
7870:  BB 03 00 53 51 8E 06 04  0B 8B C8 26 A1 72 89 8B   ...SQ... ...&.r..
7880:  DA 99 52 50 89 4E E6 89  5E E8 9A FA 2A E5 0A B9   ..RP.N.. ^...*...
7890:  FA 00 BB 01 00 53 51 8E  06 04 0B 8B C8 26 A1 68   .....SQ. .....&.h
78A0:  89 8B DA 99 52 50 89 4E  EA 89 5E EC 9A FA 2A E5   ....RP.N ..^...*.
78B0:  0A 03 46 EA 13 56 EC 03  46 E6 13 56 E8 03 F0 13   ..F..V.. F..V....
78C0:  FA 81 EE CB 86 83 DF 36  57 56 9A 60 2A E5 0A 8E   .......6 WV.`*...
78D0:  06 04 0B 26 A3 9E 89 A1  36 01 26 39 06 9E 89 7F   ...&.... 6.&9....
78E0:  03 E9 0E 00 26 C7 06 A6  89 01 00 26 A1 A6 89 E9   ....&... ...&....
78F0:  2D 04 8E 06 04 0B 26 83  3E 62 89 01 74 03 E9 4A   -.....&. >b..t..J
7900:  01 B8 E8 03 BA 00 00 52  50 B8 68 15 BA 00 00 52   .......R P.h....R
7910:  50 8E 06 02 0B 26 FF 36  A8 EF 26 FF 36 A6 EF 9A   P....&.6 ..&.6...
7920:  FA 2A E5 0A B9 C2 C3 BB  00 00 53 51 8E 06 04 0B   .*...... ..SQ....
7930:  8B C8 26 A1 5C 89 8B DA  99 52 50 8B F1 8B FB 9A   ..&.\... .RP.....
```

```
7940:  FA 2A E5 0A B9 C3 B4 BB  00 00 53 51 8E 06 04 0B   .*...... ..SQ....
7950:  8B C8 26 A1 52 89 8B DA  99 52 50 89 4E E6 89 5E   ..&.R... .RP.N..^
7960:  E8 9A FA 2A E5 0A B9 D2  11 BB 00 00 53 51 8E 06   ...*.... ....SQ..
7970:  02 0B 26 FF 36 A4 EF 26  FF 36 A2 EF 89 46 EA 89   ..&.6..& .6...F..
7980:  56 EC 9A FA 2A E5 0A B9  05 6B BB 03 00 53 51 8E   V...*... .k...SQ.
7990:  06 04 0B 8B C8 26 A1 74  89 8B DA 99 52 50 89 4E   .....&.t ....RP.N
79A0:  EE 89 5E F0 9A FA 2A E5  0A B9 93 0A BB 06 00 53   ..^...*. .......S
79B0:  51 8E 06 04 0B 8B C8 26  A1 72 89 8B DA 99 52 50   Q......& .r....RP
79C0:  89 4E E2 89 5E E4 9A FA  2A E5 0A 8E 06 04 0B 8B   .N..^... *.......
79D0:  C8 B8 82 6B 8B DA 26 F7  2E 78 89 03 C8 13 DA 03   ...k..&. .x......
79E0:  4E E2 13 5E E4 03 4E EE  13 5E F0 03 4E EA 13 5E   N..^..N. .^..N..^
79F0:  EC 03 4E E6 13 5E E8 03  F1 13 FB 81 EE AA 9F 83   ..N..^.. ........
7A00:  DF 27 57 56 9A 60 2A E5  0A 8E 06 04 0B 26 A3 9E   .'WV.`*. .....&..
7A10:  89 A1 34 01 26 39 06 9E  89 7F 03 E9 0E 00 26 C7   ..4.&9.. ......&.
7A20:  06 A6 89 01 00 26 A1 A6  89 E9 F3 02 8E 06 04 0B   .....&.. ........
7A30:  A1 32 01 26 39 06 9E 89  7C 03 E9 0E 00 26 C7 06   .2.&9... |....&..
7A40:  A6 89 FF FF 26 A1 A6 89  E9 D4 02 B8 E8 03 BA 00   ....&... ........
7A50:  00 52 50 B8 3B 18 BA 00  00 52 50 8E 06 02 0B 26   .RP.;... .RP....&
7A60:  FF 36 A4 EF 26 FF 36 A2  EF 9A FA 2A E5 0A B9 15   .6..&.6. ...*....
7A70:  18 BB 00 00 53 51 8E 06  02 0B 26 FF 36 A8 EF 26   ....SQ.. ..&.6..&
7A80:  FF 36 A6 EF 8B F0 8B FA  9A FA 2A E5 0A B9 BE 4A   .6...... ..*....J
7A90:  BB 05 00 53 51 8E 06 04  0B 8B C8 26 A1 62 89 8B   ...SQ... ...&.b..
7AA0:  DA 99 52 50 89 4E E2 89  5E E4 9A FA 2A E5 0A B9   ..RP.N.. ^...*...
7AB0:  20 84 BB 01 00 53 51 8E  06 04 0B 8B C8 26 A1 52    ....SQ. .....&.R
7AC0:  89 8B DA 99 52 50 89 4E  E6 89 5E E8 9A FA 2A E5   ....RP.N ..^...*.
7AD0:  0A B9 BE FD BB 01 00 53  51 8E 06 04 0B 8B C8 26   .......S Q......&
7AE0:  A1 68 89 8B DA 99 52 50  89 4E EA 89 5E EC 9A FA   .h....RP .N..^...
7AF0:  2A E5 0A 03 46 EA 13 56  EC 8E 06 04 0B 8B C8 B8   *...F..V ........
7B00:  90 0F 8B DA 26 F7 2E 5E  89 2B C8 1B DA 03 4E E6   ....&..^ .+....N.
7B10:  13 5E E8 B8 5B 2E 26 F7  2E 5C 89 03 C1 13 D3 03   .^..[.&. .\......
7B20:  46 E2 13 56 E4 03 F0 13  FA 81 EE E1 75 83 DF 3B   F..V.... ....u..;
7B30:  57 56 9A 60 2A E5 0A 8E  06 04 0B 26 A3 A2 89 A1   WV.`*... ...&....
7B40:  3A 01 26 39 06 A2 89 7F  03 E9 0E 00 26 C7 06 A6   :.&9.... ....&...
7B50:  89 02 00 26 A1 A6 89 E9  C5 01 8E 06 04 0B A1 38   ...&.... .......8
7B60:  01 26 39 06 A2 89 7C 03  E9 0E 00 26 C7 06 A6 89   .&9...|. ...&....
7B70:  FE FF 26 A1 A6 89 E9 A6  01 B8 E8 03 BA 00 00 52   ..&..... .......R
7B80:  50 B8 E1 03 BA 00 00 52  50 FF 76 FC FF 76 FA 9A   P......R P.v..v..
7B90:  FA 2A E5 0A B9 CF 9D BB  01 00 53 51 8E 06 02 0B   .*...... ..SQ....
7BA0:  26 FF 36 B0 EF 26 FF 36  AE EF 8B F0 8B FA 9A FA   &.6..&.6 ........
7BB0:  2A E5 0A B9 27 22 BB 00  00 53 51 8E 06 02 0B 26   *...'".. .SQ....&
7BC0:  FF 36 A4 EF 26 FF 36 A2  EF 89 46 E2 89 56 E4 9A   .6..&.6. ..F..V..
7BD0:  FA 2A E5 0A B9 9E 2E BB  05 00 53 51 8E 06 04 0B   .*...... ..SQ....
7BE0:  8B C8 26 A1 52 89 8B DA  99 52 50 89 4E E6 89 5E   ..&.R... .RP.N..^
7BF0:  E8 9A FA 2A E5 0A 8E 06  04 0B 8B C8 B8 E8 1D 8B   ...*.... ........
7C00:  DA 26 F7 2E 56 89 89 46  EA 89 56 EC B8 16 C5 26   .&..V..F ..V....&
7C10:  F7 2E 5E 89 2B 46 EA 1B  56 EC 03 C8 13 DA 8E 06   ..^.+F.. V.......
7C20:  06 0B B8 83 6E 26 F7 2E  84 00 03 C8 13 DA 8E 06   ....n&.. ........
7C30:  04 0B B8 0F 07 26 F7 2E  6E 89 03 C1 13 D3 03 46   .....&.. n......F
7C40:  E6 13 56 E8 03 46 E2 13  56 E4 03 F0 13 FA 81 EE   ..V..F.. V.......
7C50:  93 F0 83 DF 6E 57 56 9A  60 2A E5 0A 8E 06 04 0B   ....nWV. `*......
7C60:  26 A3 A4 89 26 83 3E A6  89 00 74 03 E9 22 00 A1   &...&.>. ..t.."..
7C70:  3C 01 26 39 06 A4 89 7F  03 E9 0A 00 26 C7 06 A6   <.&9.... ....&...
7C80:  89 03 00 E9 0B 00 8E 06  04 0B 26 C7 06 A6 89 FD   ........ ..&.....
7C90:  FF 83 3E 40 01 01 74 03  E9 60 00 8E 06 04 0B 26   ..>@..t. .`.....&
```

```
7CA0:  83 3E 80 89 00 7F 03 E9  51 00 C7 46 FE 00 00 A1   .>...... Q..F....
7CB0:  3E 01 26 39 06 8C 89 7F  03 E9 03 00 FF 46 FE 8E   >.&9.... .....F..
7CC0:  06 04 0B A1 3E 01 26 39  06 98 89 7F 03 E9 03 00   ....>.&9 ........
7CD0:  FF 46 FE 8E 06 04 0B A1  3E 01 26 39 06 A4 89 7F   .F...... >.&9....
7CE0:  03 E9 03 00 FF 46 FE 83  7E FE 02 7D 03 E9 0B 00   .....F.. ~..}....
7CF0:  8E 06 04 0B 26 C7 06 A6  89 03 00 8E 06 04 0B 26   ....&... .......&
7D00:  A1 A6 89 8E 06 06 0B 26  2B 06 72 00 8E 06 02 0B   .......& +.r.....
7D10:  26 A3 DC EF 8E 06 04 0B  26 A1 A6 89 E9 00 00 5E   &....... &......^
7D20:  5F 8B E5 5D CB 55 8B EC  81 EC 00 00 57 56 8E 06   _..].U.. ....WV..
7D30:  0A 0B 26 A1 AC 89 26 2B  06 AA 89 8E 06 0C 0B 26   ..&...&+ .......&
7D40:  A3 04 88 8E 06 06 0B 26  A1 62 00 26 2B 06 60 00   .......& .b.&+.`.
7D50:  8E 06 08 0B 26 A3 36 00  8E 06 0C 0B 26 A1 F8 87   ....&.6. ....&...
7D60:  26 8B 0E 04 88 83 F9 01  7C 03 E9 03 00 B9 01 00   &....... |.......
7D70:  99 F7 F9 26 A3 02 88 8E  06 08 0B 26 A1 2A 00 26   ...&.... ...&.*.&
7D80:  8B 0E 36 00 83 F9 01 7C  03 E9 03 00 B9 01 00 99   ..6....| ........
7D90:  F7 F9 26 A3 34 00 B8 FF  FF BA FF FF 8E 06 02 0B   ..&.4... ........
7DA0:  26 A3 96 EF 26 89 16 98  EF 26 A3 8E EF 26 89 16   &...&... .&...&..
7DB0:  90 EF B8 FF FF BA FF FF  26 A3 9A EF 26 89 16 9C   ........ &...&...
7DC0:  EF 26 A3 92 EF 26 89 16  94 EF 8E 06 06 0B 26 A1   .&...&.. ......&.
7DD0:  62 00 8E 06 0A 0B 26 03  06 AC 89 99 52 50 26 A1   b.....&. ....RP&.
7DE0:  AC 89 8E 06 06 0B 26 2B  06 62 00 50 9A EA 29 E5   ......&+ .b.P..).
7DF0:  0A 83 C4 02 B9 D0 07 F7  E9 52 50 9A 60 2A E5 0A   ........ .RP.`*..
7E00:  8E 06 02 0B 26 A3 62 EF  26 89 16 64 EF 8E 06 06   ....&.b. &..d....
7E10:  0B 26 A1 60 00 8E 06 0A  0B 26 03 06 AA 89 99 52   .&.`.... .&.....R
7E20:  50 26 A1 AA 89 8E 06 06  0B 26 2B 06 60 00 50 9A   P&...... .&+.`.P.
7E30:  EA 29 E5 0A 83 C4 02 B9  D0 07 F7 E9 52 50 9A 60   .)...... ....RP.`
7E40:  2A E5 0A 8E 06 02 0B 26  A3 66 EF 26 89 16 68 EF   *......& .f.&..h.
7E50:  8E 06 08 0B 26 A1 2A 00  8E 06 0C 0B 26 03 06 F8   ....&.*. ....&...
7E60:  87 50 9A EA 29 E5 0A 83  C4 02 99 52 50 8E 06 0C   .P..)... ...RP...
7E70:  0B 26 A1 F8 87 8C C1 8E  06 08 0B 26 2B 06 2A 00   .&...... ...&+.*.
7E80:  50 9A EA 29 E5 0A 83 C4  02 B9 D0 07 F7 E9 52 50   P..).... ......RP
7E90:  9A 60 2A E5 0A 8E 06 02  0B 26 A3 6A EF 26 89 16   .`*..... .&.j.&..
7EA0:  6C EF 8E 06 08 0B 26 A1  2E 00 8E 06 0C 0B 26 03   l.....&. ......&.
7EB0:  06 FC 87 99 52 50 26 A1  FC 87 8E 06 08 0B 26 2B   ....RP&. ......&+
7EC0:  06 2E 00 50 9A EA 29 E5  0A 83 C4 02 B9 D0 07 F7   ...P..). ........
7ED0:  E9 52 50 9A 60 2A E5 0A  8E 06 02 0B 26 A3 76 EF   .RP.`*.. ....&.v.
7EE0:  26 89 16 78 EF 8E 06 08  0B 26 A1 30 00 8E 06 0C   &..x.... .&.0....
7EF0:  0B 26 03 06 FE 87 3D 01  00 7C 03 E9 03 00 B8 01   .&....=. .|......
7F00:  00 99 52 50 26 A1 FE 87  8E 06 08 0B 26 2B 06 30   ..RP&... ....&+.0
7F10:  00 50 9A EA 29 E5 0A 83  C4 02 B9 D0 07 F7 E9 52   .P..)... .......R
7F20:  50 9A 60 2A E5 0A 8E 06  02 0B 26 A3 7A EF 26 89   P.`*.... ..&.z.&.
7F30:  16 7C EF 8E 06 08 0B 26  A1 2C 00 8E 06 0C 0B 26   .|.....& .,.....&
7F40:  03 06 FA 87 3D 01 00 7C  03 E9 03 00 B8 01 00 99   ....=..| ........
7F50:  52 50 26 A1 FA 87 8E 06  08 0B 26 2B 06 2C 00 50   RP&..... ..&+.,.P
7F60:  9A EA 29 E5 0A 83 C4 02  B9 D0 07 F7 E9 52 50 9A   ..)..... .....RP.
7F70:  60 2A E5 0A 8E 06 02 0B  26 A3 72 EF 26 89 16 74   `*...... &.r.&..t
7F80:  EF 8E 06 08 0B 26 A1 34  00 8E 06 0C 0B 26 03 06   .....&.4 .....&..
7F90:  02 88 99 52 50 26 A1 02  88 8E 06 08 0B 26 2B 06   ...RP&.. .....&+.
7FA0:  34 00 50 9A EA 29 E5 0A  83 C4 02 B9 D0 07 F7 E9   4.P..).. ........
7FB0:  52 50 9A 60 2A E5 0A 8E  06 02 0B 26 A3 7E EF 26   RP.`*... ...&.~.&
7FC0:  89 16 80 EF 8E 06 06 0B  26 A1 64 00 8E 06 0A 0B   ........ &.d.....
7FD0:  26 03 06 AE 89 3D 01 00  7C 03 E9 03 00 B8 01 00   &....=.. |.......
7FE0:  99 52 50 26 A1 AE 89 8E  06 06 0B 26 2B 06 64 00   .RP&.... ...&+.d.
7FF0:  50 9A EA 29 E5 0A 83 C4  02 B9 D0 07 F7 E9 52 50   P..).... ......RP
```

```
8000:  9A 60 2A E5 0A 8E 06 02  0B 26 A3 86 EF 26 89 16   .`*..... .&...&..
8010:  88 EF 8E 06 06 0B 26 A1  64 00 8E 06 0A 0B 26 03   ......&. d.....&.
8020:  06 AE 89 3D 01 00 7C 03  E9 03 00 B8 01 00 99 52   ...=..|. .......R
8030:  50 26 A1 B0 89 8E 06 06  0B 26 2B 06 66 00 50 9A   P&...... .&+.f.P.
8040:  EA 29 E5 0A 83 C4 02 B9  D0 07 F7 E9 52 50 9A 60   .)...... ....RP.`
8050:  2A E5 0A 8E 06 02 0B 26  A3 8A EF 26 89 16 8C EF   *......& ...&....
8060:  8E 06 08 0B 26 A1 2A 00  99 52 50 8E 06 06 0B B8   ....&.*. .RP.....
8070:  E8 03 26 F7 2E 84 00 52  50 9A 60 2A E5 0A 8E 06   ..&....R P.`*....
8080:  0C 0B 8B C8 26 A1 F8 87  8B DA 99 52 50 8E 06 0A   ....&... ...RP...
8090:  0B B8 E8 03 26 F7 2E CE  89 52 50 8B F1 8B FB 9A   ....&... .RP.....
80A0:  60 2A E5 0A 2B C6 1B D7  52 50 9A F8 29 E5 0A 83   `*..+... RP..)...
80B0:  C4 04 8E 06 02 0B 26 A3  AE EF 26 89 16 B0 EF 5E   ......&. ..&....^
80C0:  5F 8B E5 5D CB 55 8B EC  81 EC 00 00 57 56 8E 06   _..].U.. ....WV..
80D0:  0A 0B 26 A1 AC 89 26 2B  06 AA 89 8E 06 0C 0B 26   ..&...&+ .......&
80E0:  A3 04 88 8E 06 06 0B 26  A1 62 00 26 2B 06 60 00   .......& .b.&+.`.
80F0:  8E 06 08 0B 26 A3 36 00  8E 06 04 0B 26 83 3E 5A   ....&.6. ....&.>Z
8100:  89 00 75 03 E9 63 00 26  A1 54 89 3D 01 00 7C 03   ..u..c.& .T.=..|.
8110:  E9 03 00 B8 01 00 99 52  50 B8 D0 07 26 F7 2E 60   .......R P...&..`
8120:  89 52 50 9A 60 2A E5 0A  8E 06 02 0B 26 A3 9E EF   .RP.`*.. ....&...
8130:  26 89 16 A0 EF 8E 06 04  0B 26 A1 54 89 3D 01 00   &....... .&.T.=..
8140:  7C 03 E9 03 00 B8 01 00  99 52 50 B8 E8 03 26 F7   |....... .RP...&.
8150:  2E 5C 89 52 50 9A 60 2A  E5 0A 8E 06 02 0B 26 A3   .\.RP.`* ......&.
8160:  A2 EF 26 89 16 A4 EF E9  1C 00 B8 00 00 BA 00 00   ..&..... ........
8170:  8E 06 02 0B 26 A3 A2 EF  26 89 16 A4 EF 26 A3 9E   ....&... &....&..
8180:  EF 26 89 16 A0 EF 5E 5F  8B E5 5D CB 55 8B EC 81   .&....^_ ..].U...
8190:  EC 00 00 57 56 8E 06 04  0B 26 A1 6C 89 26 8B 0E   ...WV... .&.l.&..
81A0:  66 89 83 F9 01 7C 03 E9  03 00 B9 01 00 99 F7 F9   f....|.. ........
81B0:  99 8E 06 02 0B 26 A3 CA  EF 26 89 16 CC EF 8E 06   .....&.. .&......
81C0:  04 0B 26 A1 6E 89 26 8B  0E 68 89 83 F9 01 7C 03   ..&.n.&. .h....|.
81D0:  E9 03 00 B9 01 00 99 F7  F9 99 8E 06 02 0B 26 A3   ........ ......&.
81E0:  CE EF 26 89 16 D0 EF 8E  06 08 0B 26 A1 36 00 8E   ..&..... ...&.6..
81F0:  06 0C 0B 26 03 06 04 88  3D 01 00 7C 03 E9 03 00   ...&.... =..|....
8200:  B8 01 00 99 52 50 8E 06  04 0B B8 D0 07 26 F7 2E   ....RP.. .....&..
8210:  66 89 52 50 9A 60 2A E5  0A 8E 06 02 0B 26 A3 B6   f.RP.`*. .....&..
8220:  EF 26 89 16 B8 EF 8E 06  08 0B 26 A1 2E 00 8E 06   .&...... ..&.....
8230:  0C 0B 26 03 06 FC 87 3D  01 00 7C 03 E9 03 00 B8   ..&....= ..|.....
8240:  01 00 99 52 50 8E 06 04  0B B8 D0 07 26 F7 2E 68   ...RP... ....&..h
8250:  89 52 50 9A 60 2A E5 0A  8E 06 02 0B 26 A3 BA EF   .RP.`*.. ....&...
8260:  26 89 16 BC EF 8E 06 08  0B 26 A1 2C 00 8E 06 0C   &....... .&.,....
8270:  0B 26 03 06 FA 87 3D 01  00 7C 03 E9 03 00 B8 01   .&....=. .|......
8280:  00 99 52 50 8E 06 04 0B  B8 D0 07 26 F7 2E 6A 89   ..RP.... ...&..j.
8290:  52 50 9A 60 2A E5 0A 8E  06 02 0B 26 A3 BE EF 26   RP.`*... ...&...&
82A0:  89 16 C0 EF 8E 06 08 0B  26 A1 2A 00 8E 06 0C 0B   ........ &.*.....
82B0:  26 03 06 F8 87 3D 01 00  7C 03 E9 03 00 B8 01 00   &....=.. |.......
82C0:  99 52 50 8E 06 04 0B B8  D0 07 26 F7 2E 6C 89 52   .RP..... ..&..l.R
82D0:  50 9A 60 2A E5 0A 8E 06  02 0B 26 A3 C2 EF 26 89   P.`*.... ..&...&.
82E0:  16 C4 EF 5E 5F 8B E5 5D  CB 55 8B EC 81 EC 02 00   ...^_..] .U......
82F0:  57 56 C7 46 FE 00 00 E9  03 00 FF 46 FE 83 7E FE   WV.F.... ...F..~.
8300:  06 7C 03 E9 5A 00 8E 06  0E 0B 8B 5E FE D1 E3 26   .|..Z... ...^...&
8310:  8B 87 1C 00 8E 06 10 0B  8B 5E FE D1 E3 26 03 87   ........ .^...&..
8320:  04 00 3D 01 00 7C 03 E9  03 00 B8 01 00 99 52 50   ..=..|.. ......RP
8330:  8E 06 12 0B 8B 5E FE D1  E3 B8 D0 07 26 F7 AF 5A   .....^.. ....&..Z
8340:  F7 52 50 9A 60 2A E5 0A  8E 06 14 0B 8B 5E FE D1   .RP.`*.. .....^..
8350:  E3 D1 E3 26 89 87 00 F7  26 89 97 02 F7 E9 9A FF   ...&.... &.......
```

```
8360:  8E 06 08 0B 26 A1 28 00  8E 06 0C 0B 26 03 06 F6   ....&.(. ....&...
8370:  87 3D 01 00 7C 03 E9 03  00 B8 01 00 99 52 50 8E   .=..|... .....RP.
8380:  06 04 0B B8 D0 07 26 F7  2E 7C 89 52 50 9A 60 2A   ......&. .|.RP.`*
8390:  E5 0A 8E 06 02 0B 26 A3  A6 EF 26 89 16 A8 EF B8   ......&. ..&.....
83A0:  06 00 50 B8 10 00 B9 9E  0D 51 50 BA 5A F7 BB 9E   ..P..... .QP.Z...
83B0:  0D 53 52 9A FF 1A 85 06  83 C4 0A 8E 06 16 0B 26   .SR..... .......&
83C0:  8B 1E 12 00 8E 06 12 0B  D1 E3 26 8B 87 5A F7 8E   ........ ..&..Z..
83D0:  06 16 0B 26 8B 1E 14 00  D1 E3 8E 06 12 0B 26 03   ...&.... ......&.
83E0:  87 5A F7 8E 06 16 0B 26  8B 1E 10 00 D1 E3 8E 06   .Z.....& ........
83F0:  12 0B 26 03 87 5A F7 99  8E 06 02 0B 26 A3 C6 EF   ..&..Z.. ....&...
8400:  26 89 16 C8 EF 8E 06 16  0B 26 8B 1E 12 00 8E 06   &....... .&......
8410:  0E 0B D1 E3 26 8B 87 1C  00 8E 06 16 0B 26 8B 1E   ....&... .....&..
8420:  14 00 D1 E3 8E 06 0E 0B  26 03 87 1C 00 8E 06 16   ........ &.......
8430:  0B 26 8B 1E 10 00 D1 E3  8E 06 0E 0B 26 03 87 1C   .&...... ....&...
8440:  00 8E 06 16 0B 26 8B 1E  14 00 8E 06 10 0B D1 E3   .....&.. ........
8450:  26 03 87 04 00 8E 06 16  0B 26 8B 1E 12 00 D1 E3   &....... .&......
8460:  8E 06 10 0B 26 03 87 04  00 8E 06 16 0B 26 8B 1E   ....&... .....&..
8470:  10 00 D1 E3 8E 06 10 0B  26 03 87 04 00 3D 01 00   ........ &....=..
8480:  7C 03 E9 03 00 B8 01 00  99 52 50 B8 E0 2E BA 00   |....... .RP.....
8490:  00 52 50 8E 06 02 0B 26  FF 36 C8 EF 26 FF 36 C6   .RP....& .6..&.6.
84A0:  EF 9A FA 2A E5 0A 52 50  9A 60 2A E5 0A 8E 06 02   ...*..RP .`*.....
84B0:  0B 26 A3 AA EF 26 89 16  AC EF B8 E8 03 BA 00 00   .&...&.. ........
84C0:  52 50 26 FF 36 AC EF 26  FF 36 AA EF 26 FF 36 C8   RP&.6..& .6..&.6.
84D0:  EF 26 FF 36 C6 EF 9A FA  2A E5 0A 52 50 9A 60 2A   .&.6.... *..RP.`*
84E0:  E5 0A 8E 06 02 0B 26 A3  B2 EF 26 89 16 B4 EF 5E   ......&. ..&....^
84F0:  5F 8B E5 5D CB 55 8B EC  81 EC 06 00 57 56 C7 46   _..].U.. ....WV.F
8500:  FE 00 00 C7 46 FC 00 00  E9 03 00 FF 46 FC 8B 46   ....F... ....F..F
8510:  0A 39 46 FC 7C 03 E9 2A  00 8B 5E FC D1 E3 C4 76   .9F.|..* ..^....v
8520:  06 8B 46 FE 26 39 00 7F  03 E9 14 00 8B 5E FC D1   ..F.&9.. .....^..
8530:  E3 C4 76 06 26 8B 00 89  46 FE 8B 46 FC 89 46 FA   ..v.&... F..F..F.
8540:  E9 C8 FF 8B 46 FC E9 00  00 5E 5F 8B E5 5D CB 55   ....F... .^_..].U
8550:  8B EC 81 EC 06 00 57 56  C7 46 FC 00 00 E9 03 00   ......WV .F......
8560:  FF 46 FC 8B 46 0E 39 46  FC 7C 03 E9 11 00 8B 5E   .F..F.9F .|.....^
8570:  FC D1 E3 C4 76 0A 8B 46  FC 26 89 00 E9 E1 FF C7   ....v..F .&......
8580:  46 FC 00 00 E9 03 00 FF  46 FC 8B 46 0E 48 3B 46   F....... F..F.H;F
8590:  FC 7F 03 E9 7B 00 8B 46  FC 40 89 46 FA E9 03 00   ....{..F .@.F....
85A0:  FF 46 FA 8B 46 0E 39 46  FA 7C 03 E9 60 00 8B 5E   .F..F.9F .|..`..^
85B0:  FC D1 E3 C4 76 0A 26 8B  18 D1 E3 C4 76 06 26 8B   ....v.&. ....v.&.
85C0:  00 8B 5E FA D1 E3 C4 76  0A 26 8B 18 D1 E3 C4 76   ..^....v .&.....v
85D0:  06 26 39 00 7F 03 E9 32  00 8B 5E FC D1 E3 C4 76   .&9....2 ..^....v
85E0:  0A 26 8B 00 89 46 FE 8B  5E FA D1 E3 C4 76 0A 26   .&...F.. ^....v.&
85F0:  8B 00 8B 5E FC D1 E3 C4  76 0A 26 89 00 8B 5E FA   ...^.... v.&...^.
8600:  D1 E3 C4 76 0A 8B 46 FE  26 89 00 E9 92 FF E9 76   ...v..F. &......v
8610:  FF 5E 5F 8B E5 5D CB 00  55 8B EC 81 EC 00 00 57   .^_..].. U......W
8620:  56 5E 5F 8B E5 5D CB 00  55 8B EC 81 EC 00 00 57   V^_..].. U......W
8630:  56 83 7E 06 00 7C 03 E9  05 00 81 46 06 68 01 83   V.~..|.. ...F.h..
8640:  7E 06 5A 7E 03 E9 18 00  83 7E 06 00 7D 03 E9 0F   ~.Z~.... .~..}...
8650:  00 8B 5E 06 D1 E3 8B 87  C0 03 E9 5E 00 E9 5B 00   ..^..... ...^..[.
8660:  81 7E 06 B4 00 7E 03 E9  1B 00 83 7E 06 5A 7F 03   .~...~.. ...~.Z..
8670:  E9 12 00 BB 28 05 8B 46  06 D1 E0 2B D8 8B 07 E9   ....(..F ...+....
8680:  39 00 E9 36 00 81 7E 06  0E 01 7E 03 E9 1B 00 81   9..6..~. ..~.....
8690:  7E 06 B4 00 7D 03 E9 11  00 8B 5E 06 D1 E3 8B 87   ~...}... ..^.....
86A0:  58 02 F7 D8 E9 14 00 E9  11 00 BB 90 06 8B 46 06   X....... ......F.
86B0:  D1 E0 2B D8 8B 07 F7 D8  E9 00 00 5E 5F 8B E5 5D   ..+..... ...^_..]
```

```
86C0:  CB 55 8B EC 81 EC 00 00  57 56 83 7E 06 00 7C 03   .U...... WV.~..|.
86D0:  E9 05 00 81 46 06 68 01  83 7E 06 5A 7E 03 E9 18   ....F.h. .~.Z~...
86E0:  00 83 7E 06 00 7D 03 E9  0F 00 8B 5E 06 D1 E3 8B   ..~..}.. ...^....
86F0:  87 0A 03 E9 5E 00 E9 5B  00 81 7E 06 B4 00 7E 03   ....^..[ ..~...~.
8700:  E9 1D 00 83 7E 06 5A 7F  03 E9 14 00 BB 72 04 8B   ....~.Z. .....r..
8710:  46 06 D1 E0 2B D8 8B 07  F7 D8 E9 37 00 E9 34 00   F...+... ...7..4.
8720:  81 7E 06 0E 01 7E 03 E9  1B 00 81 7E 06 B4 00 7D   .~...~.. ...~...}
8730:  03 E9 11 00 8B 5E 06 D1  E3 8B 87 A2 01 F7 D8 E9   .....^.. ........
8740:  12 00 E9 0F 00 BB DA 05  8B 46 06 D1 E0 2B D8 8B   ........ .F...+..
8750:  07 E9 00 00 5E 5F 8B E5  5D CB 55 8B EC 81 EC 08   ....^_.. ].U.....
8760:  00 57 56 8B 46 08 0B 46  06 74 03 E9 09 00 B8 00   .WV.F..F .t......
8770:  00 BA 00 00 E9 73 00 C7  46 FC E8 03 C7 46 FE 00   .....s.. F....F..
8780:  00 C7 46 F8 E7 03 C7 46  FA 00 00 8B 46 FC 8B 56   ..F....F ....F..V
8790:  FE 39 56 FA 7E 03 E9 48  00 7D 03 E9 08 00 39 46   .9V.~..H .}....9F
87A0:  F8 72 03 E9 3B 00 8B 46  F8 8B 56 FA 89 46 FC 89   .r..;..F ..V..F..
87B0:  56 FE B8 02 00 BA 00 00  52 50 FF 76 FE FF 76 FC   V....... RP.v..v.
87C0:  FF 76 08 FF 76 06 9A 60  2A E5 0A 03 46 FC 13 56   .v..v..` *...F..V
87D0:  FE 52 50 9A 60 2A E5 0A  89 46 F8 89 56 FA E9 AA   .RP.`*.. .F..V...
87E0:  FF 8B 46 F8 8B 56 FA E9  00 00 5E 5F 8B E5 5D CB   ..F..V.. ..^_..].
87F0:  55 8B EC 81 EC 06 00 57  56 83 7E 08 00 74 03 E9   U......W V.~..t..
8800:  1A 00 83 7E 06 00 74 03  E9 09 00 B8 FF FF E9 AF   ...~..t. ........
8810:  00 E9 05 00 C7 46 FE 5A  00 E9 7A 00 83 7E 06 00   .....F.Z ..z..~..
8820:  74 03 E9 08 00 C7 46 FE  00 00 E9 69 00 FF 76 08   t.....F. ...i..v.
8830:  9A EA 29 E5 0A 83 C4 02  89 46 FC FF 76 06 9A EA   ..)..... .F..v...
8840:  29 E5 0A 83 C4 02 89 46  FA 8B 46 FC 39 46 FA 7C   )......F ..F.9F.|
8850:  03 E9 21 00 8B 46 FC 99  52 50 B8 64 00 F7 6E FA   ..!..F.. RP.d..n.
8860:  52 50 9A 60 2A E5 0A 8B  D8 D1 E3 8B 87 40 02 89   RP.`*... .....@..
8870:  46 FE E9 21 00 8B 46 FA  99 52 50 B8 64 00 F7 6E   F..!..F. .RP.d..n
8880:  FC 52 50 9A 60 2A E5 0A  8B D8 D1 E3 B8 5A 00 2B   .RP.`*.. .....Z.+
8890:  87 40 02 89 46 FE 83 7E  08 00 7C 03 E9 09 00 B8   .@..F..~ ..|.....
88A0:  B4 00 2B 46 FE 89 46 FE  83 7E 06 00 7F 03 E9 09   ..+F..F. .~......
88B0:  00 B8 68 01 2B 46 FE 89  46 FE 8B 46 FE E9 00 00   ..h.+F.. F..F....
88C0:  5E 5F 8B E5 5D CB 55 8B  EC 81 EC 06 00 57 56 C7   ^_..].U. .....WV.
88D0:  46 FE 01 00 8B 46 06 89  46 FA 83 7E FA 00 7C 03   F....F.. F..~..|.
88E0:  E9 05 00 81 46 FA 68 01  81 7E FA B4 00 7D 03 E9   ....F.h. .~...}..
88F0:  05 00 81 6E FA B4 00 83  7E FA 5A 74 03 E9 06 00   ...n.... ~.Zt....
8900:  B8 FF FF E9 2C 00 83 7E  FA 5A 7F 03 E9 0E 00 B8   ....,..~ .Z......
8910:  B4 00 2B 46 FA 89 46 FA  C7 46 FE FF FF 8B 5E FA   ..+F..F. .F....^.
8920:  D1 E3 8B 87 8C 01 F7 6E  FE 89 46 FC 8B 46 FC E9   .......n ..F..F..
8930:  00 00 5E 5F 8B E5 5D CB  55 8B EC 81 EC 02 00 57   ..^_..]. U......W
8940:  56 B8 1A 00 F7 6E 0A 8B  F0 C4 5E 06 26 83 78 04   V....n.. ..^.&.x.
8950:  FF 75 03 E9 37 00 B8 1A  00 F7 6E 0A 8B F0 C4 5E   .u..7... ..n....^
8960:  06 26 8B 40 0A 8B C8 B8  1A 00 F7 6E 0A 8B F0 C4   .&.@.... ...n....
8970:  5E 06 26 39 48 04 75 03  E9 12 00 B8 1A 00 F7 6E   ^.&9H.u. .......n
8980:  0A 8B F0 C4 5E 06 26 8B  40 04 E9 FF 00 B8 1A 00   ....^.&. @.......
8990:  F7 6E 0A 8B F0 C4 5E 06  26 83 78 10 FF 75 03 E9   .n....^. &.x..u..
89A0:  37 00 B8 1A 00 F7 6E 0A  8B F0 C4 5E 06 26 8B 40   7.....n. ...^.&.@
89B0:  10 8B C8 B8 1A 00 F7 6E  0A 8B F0 C4 5E 06 26 39   .......n ....^.&9
89C0:  48 0A 75 03 E9 12 00 B8  1A 00 F7 6E 0A 8B F0 C4   H.u..... ...n....
89D0:  5E 06 26 8B 40 10 E9 B3  00 B8 1A 00 F7 6E 0A 8B   ^.&.@... .....n..
89E0:  F0 C4 5E 06 26 8B 40 0A  89 46 FE B8 1A 00 F7 6E   ..^.&.@. .F.....n
89F0:  FE 8B F0 C4 5E 06 8B 46  0A 26 39 40 04 74 03 E9   ....^..F .&9@.t..
8A00:  63 00 B8 1A 00 F7 6E FE  8B F0 C4 5E 06 8B 46 0A   c.....n. ...^..F.
8A10:  26 39 40 10 75 03 E9 4C  00 B8 1A 00 F7 6E FE 8B   &9@.u..L .....n..
```

MATCH.DMP Thursday, January 6, 1994 12:04pm Page 42

```
8A20:  F0 C4 5E 06 26 83 78 10  FF 75 03 E9 37 00 B8 1A   ..^.&.x. .u..7...
8A30:  00 F7 6E FE 8B F0 C4 5E  06 26 8B 40 10 8B C8 B8   ..n....^ .&.@....
8A40:  1A 00 F7 6E FE 8B F0 C4  5E 06 26 39 48 0A 75 03   ...n.... ^.&9H.u.
8A50:  E9 12 00 B8 1A 00 F7 6E  FE 8B F0 C4 5E 06 26 8B   .......n ....^.&.
8A60:  40 10 E9 27 00 8B 46 FE  89 46 0A B8 1A 00 F7 6E   @..'..F. .F.....n
8A70:  0A 8B F0 C4 5E 06 26 8B  40 0A 89 46 FE 40 74 03   ....^.&. @..F.@t.
8A80:  E9 06 00 B8 FF FF E9 03  00 E9 5F FF 5E 5F 8B E5   ........ .._.^_..
8A90:  5D CB 55 8B EC 81 EC 00  00 57 56 8B 46 0A 2B 46   ].U..... .WV.F.+F
8AA0:  06 50 8B 46 0C 2B 46 08  50 9A D0 01 42 08 83 C4   .P.F.+F. P...B...
8AB0:  04 E9 00 00 5E 5F 8B E5  5D CB 55 8B EC 81 EC 02   ....^_.. ].U.....
8AC0:  00 57 56 FF 76 14 FF 76  12 FF 76 10 FF 76 0E 9A   .WV.v..v ..v..v..
8AD0:  62 01 73 08 83 C4 08 FF  76 0C FF 76 0A FF 76 08   b.s..... v..v..v.
8AE0:  FF 76 06 8B F0 9A 62 01  73 08 83 C4 08 2B C6 89   .v....b. s....+..
8AF0:  46 FE 81 7E FE B4 00 7F  03 E9 09 00 8B 46 FE 2D   F..~.... .....F.-
8B00:  68 01 E9 16 00 81 7E FE  4C FF 7D 03 E9 06 00 8B   h.....~. L.}.....
8B10:  46 FE E9 06 00 8B 46 FE  05 68 01 E9 00 00 5E 5F   F.....F. .h....^_
8B20:  8B E5 5D CB 55 8B EC 81  EC 08 00 57 56 FF 36 22   ..].U... ...WV.6"
8B30:  0C FF 36 20 0C C4 5E 06  26 8B 07 99 52 50 9A FA   ..6 ..^. &...RP..
8B40:  2A E5 0A FF 36 2E 0C FF  36 2C 0C C4 5E 0A 8B C8   *...6... 6,..^...
8B50:  26 8B 07 8B DA 99 52 50  8B F1 8B FB 9A FA 2A E5   &.....RP ......*.
8B60:  0A 03 F0 13 FA 03 36 38  0C 13 3E 3A 0C 81 C6 88   ......68 ..>:....
8B70:  13 83 D7 00 89 76 FC 89  7E FE FF 36 26 0C FF 36   .....v.. ~..6&..6
8B80:  24 0C C4 5E 06 26 8B 07  99 52 50 9A FA 2A E5 0A   $..^.&.. .RP..*..
8B90:  FF 36 32 0C FF 36 30 0C  C4 5E 0A 8B C8 26 8B 07   .62..60. .^...&..
8BA0:  8B DA 99 52 50 8B F1 8B  FB 9A FA 2A E5 0A 03 F0   ...RP... ...*....
8BB0:  13 FA 03 36 3C 0C 13 3E  3E 0C 81 C6 88 13 83 D7   ...6<..> >.......
8BC0:  00 89 76 F8 89 7E FA B8  10 27 BA 00 00 52 50 FF   ..v..~.. .'...RP.
8BD0:  76 FE FF 76 FC 9A 60 2A  E5 0A C4 5E 06 26 89 07   v..v..`* ...^.&..
8BE0:  B8 10 27 BA 00 00 52 50  FF 76 FA FF 76 F8 9A 60   ..'...RP .v..v..`
8BF0:  2A E5 0A C4 5E 0A 26 89  07 5E 5F 8B E5 5D CB 55   *...^.&. .^_..].U
8C00:  8B EC 81 EC 06 00 57 56  FF 76 14 FF 76 12 FF 76   ......WV .v..v..v
8C10:  10 FF 76 0E FF 76 0C FF  76 0A FF 76 08 FF 76 06   ..v..v.. v..v..v.
8C20:  9A 8A 01 73 08 83 C4 10  89 46 FA 83 7E FA 00 7C   ...s.... .F..~..|
8C30:  03 E9 27 00 8B 46 FA F7  D8 50 9A A1 00 42 08 83   ..'..F.. .P...B..
8C40:  C4 02 89 46 FE 8B 46 FA  F7 D8 50 9A 08 00 42 08   ...F..F. ..P...B.
8C50:  83 C4 02 F7 D8 89 46 FC  E9 1C 00 FF 76 FA 9A A1   ......F. ....v...
8C60:  00 42 08 83 C4 02 89 46  FE FF 76 FA 9A 08 00 42   .B.....F ..v....B
8C70:  08 83 C4 02 89 46 FC 8B  46 FE 99 A3 20 0C 89 16   .....F.. F... ...
8C80:  22 0C 8B 46 FC F7 D8 99  A3 2C 0C 89 16 2E 0C 8B   "..F.... .,......
8C90:  46 08 F7 D8 F7 6E FC 8B  C8 8B 46 06 F7 D8 8B DA   F....n.. ..F.....
8CA0:  F7 6E FE 2B C1 1B D3 8B  C8 B8 10 27 8B DA F7 6E   .n.+.... ...'...n
8CB0:  0E 03 C1 13 D3 A3 38 0C  89 16 3A 0C 8B 46 FC 99   ......8. ..:..F..
8CC0:  A3 24 0C 89 16 26 0C 8B  46 FE 99 A3 30 0C 89 16   .$...&.. F...0...
8CD0:  32 0C 8B 46 08 F7 D8 F7  6E FE 8B C8 8B 46 06 F7   2..F.... n....F..
8CE0:  D8 8B DA F7 6E FC 03 C8  13 DA B8 10 27 F7 6E 10   ....n... ....'.n.
8CF0:  03 C8 13 DA 89 0E 3C 0C  89 1E 3E 0C 2B C0 A3 2A   ......<. ..>.+..*
8D00:  0C A3 28 0C 2B C0 A3 36  0C A3 34 0C C7 06 40 0C   ..(.+..6 ..4...@.
8D10:  01 00 C7 06 42 0C 00 00  5E 5F 8B E5 5D CB 55 8B   ....B... ^_..].U.
8D20:  EC 81 EC 0C 00 57 56 83  7E 0A FF 75 03 E9 07 02   .....WV. ~..u....
8D30:  B8 1A 00 F7 6E 0A 03 46  06 8B 56 08 05 04 00 1E   ....n..F ..V.....
8D40:  8D 7E F8 8B F0 16 07 8E  DA A5 A5 A5 1F B8 1A 00   .~...... ........
8D50:  F7 6E 0A 8B F0 C4 5E 06  26 83 78 0A FF 74 03 E9   .n....^. &.x..t..
8D60:  08 00 C7 46 F4 02 00 E9  30 00 B8 1A 00 F7 6E 0A   ...F.... 0.....n.
8D70:  8B F0 C4 5E 06 B8 1A 00  26 F7 68 0A 8B F0 C4 5E   ...^.... &.h....^
```

MATCH.DMP Thursday, January 6, 1994 12:04pm Page 43

```
8D80:  06 8B 46 0A 26 39 40 04  74 03 E9 08 00 C7 46 F4   ..F.&9@. t.....F.
8D90:  02 00 E9 05 00 C7 46 F4  16 00 8B 46 0C E9 6F 01   ......F. ...F..o.
8DA0:  B8 1A 00 F7 6E 0A 03 46  06 8B 56 08 05 10 00 8B   ....n..F ..V.....
8DB0:  C8 B8 1A 00 8B DA F7 6E  0A 8B F0 8B C3 C4 5E 06   .......n ......^.
8DC0:  1E 8D 78 04 8B F1 8E D8  A5 A5 A5 1F B8 1A 00 F7   ..x..... ........
8DD0:  6E 0A 03 46 06 8B 56 08  05 0A 00 8B C8 B8 1A 00   n..F..V. ........
8DE0:  8B DA F7 6E 0A 8B F0 8B  C3 C4 5E 06 1E 8D 78 10   ...n.... ..^...x.
8DF0:  8B F1 8E D8 A5 A5 A5 1F  B8 1A 00 F7 6E 0A 8B F0   ........ ....n...
8E00:  C4 5E 06 8D 78 0A 8D 76  F8 A5 A5 A5 FF 76 F4 B8   .^..x..v .....v..
8E10:  1A 00 F7 6E 0A 8B F0 C4  5E 06 26 FF 70 10 FF 76   ...n.... ^.&.p..v
8E20:  08 FF 76 06 9A 13 06 73  08 83 C4 08 89 46 F6 B8   ..v....s .....F..
8E30:  0A 00 50 B8 1A 00 F7 6E  0A 8B F0 C4 5E 06 26 FF   ..P....n ....^.&.
8E40:  70 0A FF 76 08 FF 76 06  9A 13 06 73 08 83 C4 08   p..v..v. ...s....
8E50:  89 46 FE E9 C9 00 B8 1A  00 F7 6E 0A 03 46 06 8B   .F...... ..n..F..
8E60:  56 08 05 0A 00 8B C8 B8  1A 00 8B DA F7 6E 0A 8B   V....... .....n..
8E70:  F0 8B C3 C4 5E 06 1E 8D  78 04 8B F1 8E D8 A5 A5   ....^... x.......
8E80:  A5 1F B8 1A 00 F7 6E 0A  03 46 06 8B 56 08 05 10   ......n. .F..V...
8E90:  00 8B C8 B8 1A 00 8B DA  F7 6E 0A 8B F0 8B C3 C4   ........ .n......
8EA0:  5E 06 1E 8D 78 0A 8B F1  8E D8 A5 A5 A5 1F B8 1A   ^...x... ........
8EB0:  00 F7 6E 0A 8B F0 C4 5E  06 8D 78 10 8D 76 F8 A5   ..n....^ ..x..v..
8EC0:  A5 A5 FF 76 F4 B8 1A 00  F7 6E 0A 8B F0 C4 5E 06   ...v.... .n....^.
8ED0:  26 FF 70 04 FF 76 08 FF  76 06 9A 13 06 73 08 83   &.p..v.. v....s..
8EE0:  C4 08 89 46 F6 B8 F4 FF  50 B8 1A 00 F7 6E 0A 8B   ...F.... P....n..
8EF0:  F0 C4 5E 06 26 FF 70 0A  FF 76 08 FF 76 06 9A 13   ..^.&.p. .v..v...
8F00:  06 73 08 83 C4 08 89 46  FE E9 13 00 E9 10 00 40   .s.....F .......@
8F10:  75 03 E9 41 FF 48 48 75  03 E9 84 FE E9 00 00 83   u..A.HHu ........
8F20:  7E FE FF 75 03 E9 09 00  8B 46 FE E9 0F 00 E9 06   ~..u.... .F......
8F30:  00 8B 46 0A E9 06 00 B8  FF FF E9 00 00 5E 5F 8B   ..F..... .....^_.
8F40:  E5 5D CB 55 8B EC 81 EC  0A 00 57 56 83 7E 0A FF   .].U.... ..WV.~..
8F50:  75 03 E9 CC 03 8B 46 0C  E9 7F 03 B8 1A 00 F7 6E   u.....F. .......n
8F60:  0A 03 46 06 8B 56 08 05  04 00 1E 8D 7E F8 8B F0   ..F..V.. ....~...
8F70:  16 07 8E DA A5 A5 A5 1F  B8 1A 00 F7 6E 0A 03 46   ........ ....n..F
8F80:  06 8B 56 08 05 10 00 8B  C8 B8 1A 00 8B DA F7 6E   ..V..... .......n
8F90:  0A 8B F0 8B C3 C4 5E 06  1E 8D 78 04 8B F1 8E D8   ......^. ..x.....
8FA0:  A5 A5 A5 1F B8 1A 00 F7  6E 0A 03 46 06 8B 56 08   ........ n..F..V.
8FB0:  05 0A 00 8B C8 B8 1A 00  8B DA F7 6E 0A 8B F0 8B   ........ ...n....
8FC0:  C3 C4 5E 06 1E 8D 78 10  8B F1 8E D8 A5 A5 A5 1F   ..^...x. ........
8FD0:  B8 1A 00 F7 6E 0A 8B F0  C4 5E 06 8D 78 0A 8D 76   ....n... .^..x..v
8FE0:  F8 A5 A5 A5 B8 0A 00 50  B8 1A 00 F7 6E 0A 8B F0   .......P ....n...
8FF0:  C4 5E 06 26 FF 70 0A FF  76 08 FF 76 06 9A 13 06   .^.&.p.. v..v....
9000:  73 08 83 C4 08 89 46 FE  E9 F2 02 B8 1A 00 F7 6E   s.....F. .......n
9010:  0A 03 46 06 8B 56 08 05  10 00 1E 8D 7E F8 8B F0   ..F..V.. ....~...
9020:  16 07 8E DA A5 A5 A5 1F  B8 1A 00 F7 6E 0A 03 46   ........ ....n..F
9030:  06 8B 56 08 05 04 00 8B  C8 B8 1A 00 8B DA F7 6E   ..V..... .......n
9040:  0A 8B F0 8B C3 C4 5E 06  1E 8D 78 10 8B F1 8E D8   ......^. ..x.....
9050:  A5 A5 A5 1F B8 1A 00 F7  6E 0A 03 46 06 8B 56 08   ........ n..F..V.
9060:  05 0A 00 8B C8 B8 1A 00  8B DA F7 6E 0A 8B F0 8B   ........ ...n....
9070:  C3 C4 5E 06 1E 8D 78 04  8B F1 8E D8 A5 A5 A5 1F   ..^...x. ........
9080:  B8 1A 00 F7 6E 0A 8B F0  C4 5E 06 8D 78 0A 8D 76   ....n... .^..x..v
9090:  F8 A5 A5 A5 B8 F4 FF 50  B8 1A 00 F7 6E 0A 8B F0   .......P ....n...
90A0:  C4 5E 06 26 FF 70 0A FF  76 08 FF 76 06 9A 13 06   .^.&.p.. v..v....
90B0:  73 08 83 C4 08 89 46 FE  E9 42 02 B8 1A 00 F7 6E   s.....F. .B.....n
90C0:  0A 03 46 06 8B 56 08 05  10 00 1E 8D 7E F8 8B F0   ..F..V.. ....~...
90D0:  16 07 8E DA A5 A5 A5 1F  B8 1A 00 F7 6E 0A 8B F0   ........ ....n...
```

```
90E0:  C4 5E 06 26 83 78 0A FF  74 03 E9 0E 00 8B 46 0A   .^.&.x.. t.....F.
90F0:  89 46 FE C7 46 F6 FF FF  E9 30 00 B8 1A 00 F7 6E   .F..F... .0.....n
9100:  0A 8B F0 C4 5E 06 B8 1A  00 26 F7 68 0A 8B F0 C4   ....^... .&.h....
9110:  5E 06 8B 46 0A 26 39 40  04 74 03 E9 08 00 C7 46   ^..F.&9@ .t.....F
9120:  F6 02 00 E9 05 00 C7 46  F6 16 00 B8 1A 00 F7 6E   .......F .......n
9130:  0A 03 46 06 8B 56 08 05  0A 00 8B C8 B8 1A 00 8B   ..F..V.. ........
9140:  DA F7 6E 0A 8B F0 8B C3  C4 5E 06 1E 8D 78 10 8B   ..n..... .^...x..
9150:  F1 8E D8 A5 A5 A5 1F B8  1A 00 F7 6E 0A 03 46 06   ........ ...n..F.
9160:  8B 56 08 05 04 00 8B C8  B8 1A 00 8B DA F7 6E 0A   .V...... ......n.
9170:  8B F0 8B C3 C4 5E 06 1E  8D 78 0A 8B F1 8E D8 A5   .....^.. .x......
9180:  A5 A5 1F B8 1A 00 F7 6E  0A 8B F0 C4 5E 06 8D 78   .......n ....^..x
9190:  04 8D 76 F8 A5 A5 A5 83  7E F6 FF 74 03 E9 03 00   ..v..... ~..t....
91A0:  E9 5A 01 FF 76 F6 B8 1A  00 F7 6E 0A 8B F0 C4 5E   .Z..v... ..n....^
91B0:  06 26 FF 70 10 FF 76 08  FF 76 06 9A 13 06 73 08   .&.p..v. .v....s.
91C0:  83 C4 08 89 46 FE E9 34  01 B8 1A 00 F7 6E 0A 03   ....F..4 .....n..
91D0:  46 06 8B 56 08 05 10 00  1E 8D 7E F8 8B F0 16 07   F..V.... ..~.....
91E0:  8E DA A5 A5 A5 1F B8 1A  00 F7 6E 0A 8B F0 C4 5E   ........ ..n....^
91F0:  06 26 83 78 0A FF 74 03  E9 0E 00 8B 46 0A 89 46   .&.x..t. ....F..F
9200:  FE C7 46 F6 FF FF E9 30  00 B8 1A 00 F7 6E 0A 8B   ..F....0 .....n..
9210:  F0 C4 5E 06 B8 1A 00 26  F7 68 0A 8B F0 C4 5E 06   ..^....& .h....^.
9220:  8B 46 0A 26 39 40 04 74  03 E9 08 00 C7 46 F6 02   .F.&9@.t .....F..
9230:  00 E9 05 00 C7 46 F6 16  00 B8 1A 00 F7 6E 0A 03   .....F.. .....n..
9240:  46 06 8B 56 08 05 04 00  8B C8 B8 1A 00 8B DA F7   F..V.... ........
9250:  6E 0A 8B F0 8B C3 C4 5E  06 1E 8D 78 10 8B F1 8E   n......^ ...x....
9260:  D8 A5 A5 A5 1F B8 1A 00  F7 6E 0A 03 46 06 8B 56   ........ .n..F..V
9270:  08 05 0A 00 8B C8 B8 1A  00 8B DA F7 6E 0A 8B F0   ........ ....n...
9280:  8B C3 C4 5E 06 1E 8D 78  04 8B F1 8E D8 A5 A5 A5   ...^...x ........
9290:  1F B8 1A 00 F7 6E 0A 8B  F0 C4 5E 06 8D 78 0A 8D   .....n.. ..^..x..
92A0:  76 F8 A5 A5 A5 83 7E F6  FF 74 03 E9 03 00 E9 4C   v.....~. .t.....L
92B0:  00 FF 76 F6 B8 1A 00 F7  6E 0A 8B F0 C4 5E 06 26   ..v..... n....^.&
92C0:  FF 70 04 FF 76 08 FF 76  06 9A 13 06 73 08 83 C4   .p..v..v ....s...
92D0:  08 89 46 FE E9 26 00 E9  23 00 2D F4 FF 75 03 E9   ..F..&.. #.-..u..
92E0:  29 FD 2D 0E 00 75 03 E9  D1 FD 2D 08 00 75 03 E9   ).-..u.. ..-..u..
92F0:  69 FC 2D 0C 00 75 03 E9  CF FE E9 00 00 B8 1A 00   i.-..u.. ........
9300:  F7 6E 0A 8B F0 C4 5E 06  26 83 78 0A FF 74 03 E9   .n....^. &.x..t..
9310:  09 00 8B 46 0A E9 0F 00  E9 06 00 8B 46 FE E9 06   ...F.... ....F...
9320:  00 B8 FF FF E9 00 00 5E  5F 8B E5 5D CB 55 8B EC   .......^ _..].U..
9330:  81 EC 04 00 57 56 C7 46  FE FF FF B8 1A 00 F7 6E   ....WV.F .......n
9340:  1C 8B F0 C4 5E 12 8B 46  1A 26 39 40 0A 74 03 E9   ....^..F .&9@.t..
9350:  7B 00 B8 1A 00 F7 6E 0E  8B F0 C4 5E 06 8B 46 10   {.....n. ...^..F.
9360:  26 39 40 04 74 03 E9 32  00 B8 1A 00 F7 6E 1A 8B   &9@.t..2 .....n..
9370:  F0 C4 5E 12 8B 46 1C 26  39 40 10 74 03 E9 18 00   ..^..F.& 9@.t....
9380:  B8 01 00 50 FF 76 1A FF  76 14 FF 76 12 9A EE 03   ...P.v.. v..v....
9390:  73 08 83 C4 08 89 46 FE  E9 2F 00 B8 1A 00 F7 6E   s.....F. ./.....n
93A0:  1A 8B F0 C4 5E 12 8B 46  1C 26 39 40 04 74 03 E9   ....^..F .&9@.t..
93B0:  18 00 B8 FF FF 50 FF 76  1A FF 76 14 FF 76 12 9A   .....P.v ..v..v..
93C0:  EE 03 73 08 83 C4 08 89  46 FE E9 4A 00 B8 1A 00   ..s..... F..J....
93D0:  F7 6E 0E 8B F0 C4 5E 06  8B 46 10 26 39 40 10 74   .n....^. .F.&9@.t
93E0:  03 E9 1B 00 B8 01 00 50  FF 76 1A FF 76 14 FF 76   .......P .v..v..v
93F0:  12 9A EE 03 73 08 83 C4  08 89 46 FE E9 18 00 B8   ....s... ..F.....
9400:  FF FF 50 FF 76 1A FF 76  14 FF 76 12 9A EE 03 73   ..P.v..v ..v....s
9410:  08 83 C4 08 89 46 FE 83  7E FE FF 75 03 E9 20 00   .....F.. ~..u.. .
9420:  B8 1A 00 F7 6E 1A 8B F0  C4 5E 12 26 8B 40 16 89   ....n... .^.&.@..
9430:  46 FC 8B 5E FC D1 E3 C4  76 16 8B 46 FE 26 89 00   F..^.... v..F.&..
```

```
9440:  8B 46 FE E9 00 00 5E 5F  8B E5 5D CB 55 8B EC 81   .F....^_ ..].U...
9450:  EC 00 00 57 56 83 3E 76  04 00 75 03 E9 0E 00 FF   ...WV.>v ..u.....
9460:  76 06 9A 1B 0D 73 08 83  C4 02 E9 0B 00 FF 76 06   v....s.. ......v.
9470:  9A 4E 0B 73 08 83 C4 02  5E 5F 8B E5 5D CB 55 8B   .N.s.... ^_..].U.
9480:  EC 81 EC 14 00 57 56 83  7E 06 00 74 03 E9 20 00   .....WV. ~..t.. .
9490:  C7 46 EC A0 DC C7 46 EE  9E 0D 8E 06 18 0B 26 A1   .F....F. ......&.
94A0:  AC 89 89 46 FA C7 46 FC  60 8B 8C 46 FE E9 1D 00   ...F..F. `..F....
94B0:  C7 46 EC 56 53 C7 46 EE  9E 0D 8E 06 1A 0B 26 A1   .F.VS.F. ......&.
94C0:  62 00 89 46 FA C7 46 FC  16 02 8C 46 FE B8 04 00   b..F..F. ...F....
94D0:  50 B8 00 00 50 FF 76 EE  FF 76 EC 9A 3E 29 E5 0A   P...P.v. .v..>)..
94E0:  83 C4 08 C7 46 F6 00 00  B8 00 00 89 46 F0 89 46   ....F... ....F..F
94F0:  F8 E9 03 00 FF 46 F0 8B  46 FA 39 46 F8 7C 03 E9   .....F.. F.9F.|..
9500:  43 01 83 7E F8 FF 75 03  E9 37 01 C7 46 F2 00 00   C..~..u. .7..F...
9510:  B8 1A 00 F7 6E F8 8B D8  C4 76 FC 26 8B 00 8B 5E   ....n... .v.&...^
9520:  F2 8B CB D1 E3 03 D9 D1  E3 C4 76 EC 26 39 00 7C   ........ ..v.&9.|
9530:  03 E9 11 00 8B 46 F6 39  46 F2 7C 03 E9 06 00 FF   .....F.9 F.|.....
9540:  46 F2 E9 CB FF B8 1A 00  F7 6E F8 8B D8 C4 76 FC   F....... .n....v.
9550:  26 8B 00 8B 5E F2 8B CB  D1 E3 03 D9 D1 E3 C4 76   &...^... .......v
9560:  EC 26 39 00 74 03 E9 37  00 B8 1A 00 F7 6E F8 8B   .&9.t..7 .....n..
9570:  F0 C4 5E FC 26 8B 40 02  8B 76 F2 8B CE D1 E6 03   ..^.&.@. .v......
9580:  F1 D1 E6 C4 5E EC 26 39  40 02 7C 03 E9 11 00 8B   ....^.&9 @.|.....
9590:  46 F6 39 46 F2 7C 03 E9  06 00 FF 46 F2 E9 A5 FF   F.9F.|.. ...F....
95A0:  8B 46 F6 89 46 F4 E9 03  00 FF 4E F4 8B 46 F2 39   .F..F... ..N..F.9
95B0:  46 F4 7F 03 E9 30 00 8B  5E F4 8B C3 D1 E3 03 D8   F....0.. ^.......
95C0:  D1 E3 C4 76 EC 8B 46 F4  8B C8 D1 E0 03 C1 D1 E0   ...v..F. ........
95D0:  03 46 EC 8B 56 EE 2D 06  00 1E 8D 38 8B F0 8E DA   .F..V.-. ...8....
95E0:  A5 A5 A5 1F E9 C2 FF FF  46 F6 B8 1A 00 F7 6E F8   ........ F.....n.
95F0:  8B D8 C4 76 FC 26 8B 00  8B 5E F2 8B CB D1 E3 03   ...v.&.. .^......
9600:  D9 D1 E3 C4 76 EC 26 89  00 B8 1A 00 F7 6E F8 8B   ....v.&. .....n..
9610:  F0 C4 5E FC 26 8B 40 02  8B 76 F2 8B CE D1 E6 03   ..^.&.@. .v......
9620:  F1 D1 E6 C4 5E EC 26 89  40 02 8B 46 F8 8B 76 F2   ....^.&. @..F..v.
9630:  8B CE D1 E6 03 F1 D1 E6  C4 5E EC 26 89 40 04 FF   ........ .^.&.@..
9640:  46 F8 E9 AF FE 5E 5F 8B  E5 5D CB 55 8B EC 81 EC   F....^_. .].U....
9650:  1C 00 57 56 83 7E 06 00  74 03 E9 2C 00 C7 46 E8   ..WV.~.. t..,..F.
9660:  A0 DC C7 46 EA 9E 0D C7  46 FC 60 8B C7 46 FE 9E   ...F.... F.`..F..
9670:  0D C7 46 E4 D0 89 C7 46  E6 9E 0D 8E 06 18 0B 26   ..F....F .......&
9680:  A1 AA 89 89 46 EE E9 29  00 C7 46 E8 56 53 C7 46   ....F..) ..F.VS.F
9690:  EA 9E 0D C7 46 FC 16 02  C7 46 FE 9E 0D C7 46 E4   ....F... .F....F.
96A0:  86 00 C7 46 E6 9E 0D 8E  06 1A 0B 26 A1 60 00 89   ...F.... ...&.`..
96B0:  46 EE B8 04 00 50 B8 00  00 50 FF 76 EA FF 76 E8   F....P.. .P.v..v.
96C0:  9A 3E 29 E5 0A 83 C4 08  C7 46 F8 00 00 C7 46 F2   .>)..... .F....F.
96D0:  00 00 E9 03 00 FF 46 F2  8B 46 EE 39 46 F2 7C 03   ......F. .F.9F.|.
96E0:  E9 4C 01 8B 5E F2 D1 E3  C4 76 E4 26 8B 00 89 46   .L..^... .v.&...F
96F0:  FA 83 7E FA 00 7D 03 E9  32 01 B8 1A 00 F7 6E FA   ..~..}.. 2.....n.
9700:  8B D8 C4 76 FC 26 8B 00  89 46 F0 3D 00 00 7D 03   ...v.&.. .F.=..}.
9710:  E9 02 01 B8 1A 00 F7 6E  FA 8B F0 C4 5E FC 26 8B   .......n ....^.&.
9720:  40 02 89 46 EC C7 46 F4  00 00 E9 03 00 FF 46 F4   @..F..F. ......F.
9730:  8B 46 F8 39 46 F4 7C 03  E9 52 00 8B 5E F4 8B C3   .F.9F.|. .R..^...
9740:  D1 E3 03 D8 D1 E3 C4 76  E8 8B 46 F0 26 39 00 7E   .......v ..F.&9.~
9750:  03 E9 33 00 8B 5E F4 8B  C3 D1 E3 03 D8 D1 E3 C4   ..3..^.. ........
9760:  76 E8 8B 46 F0 26 39 00  74 03 E9 1D 00 8B 76 F4   v..F.&9. t.....v.
9770:  8B C6 D1 E6 03 F0 D1 E6  C4 5E E8 8B 46 EC 26 39   ........ .^..F.&9
9780:  40 02 7F 03 E9 03 00 E9  03 00 E9 A0 FF 8B 46 F8   @....... ......F.
9790:  89 46 F6 E9 03 00 FF 4E  F6 8B 46 F4 39 46 F6 7F   .F.....N ..F.9F..
```

```
97A0:  03 E9 30 00 8B 5E F6 8B  C3 D1 E3 03 D8 D1 E3 C4   ..0..^.. ........
97B0:  76 E8 8B 46 F6 8B C8 D1  E0 03 C1 D1 E0 03 46 E8   v..F.... ......F.
97C0:  8B 56 EA 2D 06 00 1E 8D  38 8B F0 8E DA A5 A5 A5   .V.-.... 8.......
97D0:  1F E9 C2 FF 8B 5E F4 8B  C3 D1 E3 03 D8 D1 E3 C4   .....^.. ........
97E0:  76 E8 8B 46 F0 26 89 00  8B 46 EC 8B 76 F4 8B CE   v..F.&.. .F..v...
97F0:  D1 E6 03 F1 D1 E6 C4 5E  E8 26 89 40 02 8B 46 FA   .......^ .&.@..F.
9800:  8B 76 F4 8B CE D1 E6 03  F1 D1 E6 C4 5E E8 26 89   .v...... ....^.&.
9810:  40 04 FF 46 F8 FF 76 FA  FF 76 FE FF 76 FC 9A 08   @..F..v. .v..v...
9820:  00 73 08 83 C4 06 89 46  FA E9 C5 FE E9 A6 FE 5E   .s.....F .......^
9830:  5F 8B E5 5D CB 00 55 8B  EC 81 EC 00 00 57 56 C7   _..]..U. .....WV.
9840:  06 78 04 FF FF C7 06 7A  04 00 00 C7 06 7C 04 FF   .x.....z .....|..
9850:  FF 5E 5F 8B E5 5D CB 55  8B EC 81 EC 00 00 57 56   .^_..].U ......WV
9860:  C4 5E 0A 26 8A 07 C4 5E  06 26 32 07 25 7F 00 C4   .^.&...^ .&2.%...
9870:  5E 0A 26 31 07 B1 07 C4  5E 06 26 8B 47 02 D3 E0   ^.&1.... ^.&.G...
9880:  C4 5E 0A 26 32 07 25 7F  00 C4 5E 06 26 8B 57 02   .^.&2.%. ..^.&.W.
9890:  D3 E2 33 C2 C4 5E 0A 26  89 07 C4 5E 06 26 8B 47   ..3..^.& ...^.&.G
98A0:  0E C4 5E 0A 26 89 47 02  C4 5E 06 26 8B 47 10 C4   ..^.&.G. .^.&.G..
98B0:  5E 0A 26 89 47 04 C4 5E  06 26 8B 47 20 25 FE 01   ^.&.G..^ .&.G %..
98C0:  D1 F8 C4 5E 0A 26 8A 6F  07 2A C9 0B C1 C4 5E 0A   ...^.&.o .*....^.
98D0:  26 89 47 06 C4 5E 06 26  8B 47 22 25 FE 01 D1 F8   &.G..^.& .G"%....
98E0:  C4 5E 0A 26 8A 4F 06 80  E1 FF 8A D1 8A F0 C4 5E   .^.&.O.. .......^
98F0:  0A 26 89 57 06 C4 5E 06  26 8B 47 24 C4 5E 0A 26   .&.W..^. &.G$.^.&
9900:  89 47 08 5E 5F 8B E5 5D  CB 55 8B EC 81 EC 00 00   .G.^_..] .U......
9910:  57 56 C4 5E 06 26 8A 07  25 7F 00 C4 5E 0A 26 89   WV.^.&.. %...^.&.
9920:  07 B1 07 C4 5E 06 26 8B  07 D3 E8 C4 5E 0A 26 89   ....^.&. ....^.&.
9930:  47 02 C4 5E 06 26 8B 47  02 C4 5E 0A 26 89 47 0E   G..^.&.G ..^.&.G.
9940:  C4 5E 06 26 8B 47 04 C4  5E 0A 26 89 47 10 C4 5E   .^.&.G.. ^.&.G..^
9950:  06 26 8A 47 06 2A E4 D1  E0 C4 5E 0A 26 89 47 20   .&.G.*.. ..^.&.G
9960:  C4 5E 06 26 8A 47 07 2A  E4 D1 E0 C4 5E 0A 26 89   .^.&.G.* ....^.&.
9970:  47 22 C4 5E 06 26 8B 47  08 C4 5E 0A 26 89 47 24   G".^.&.G ..^.&.G$
9980:  5E 5F 8B E5 5D CB 55 8B  EC 81 EC 00 00 57 56 C4   ^_..].U. .....WV.
9990:  5E 0E 26 C7 07 00 00 C4  5E 0E 2B C0 26 89 47 04   ^.&..... ^.+.&.G.
99A0:  26 89 47 02 B8 1A 00 F7  6E 0C 8B D8 C4 76 06 26   &.G..... n....v.&
99B0:  8B 00 25 FE 01 D1 F8 C4  5E 0E 26 8A 6F 01 2A C9   ..%..... ^.&.o.*.
99C0:  0B C1 C4 5E 0E 26 89 07  B8 1A 00 F7 6E 0C 8B F0   ...^.&.. ....n...
99D0:  C4 5E 06 26 8B 40 02 25  FE 01 D1 F8 C4 5E 0E 26   .^.&.@.% .....^.&
99E0:  8A 0F 80 E1 FF 8A D1 8A  F0 C4 5E 0E 26 89 17 B8   ........ ..^.&...
99F0:  1A 00 F7 6E 0C 8B F0 C4  5E 06 26 8A 60 18 D0 E4   ...n.... ^.&.`...
9A00:  2A C0 C4 5E 0E 26 32 67  05 25 00 02 C4 5E 0E 26   *..^.&2g .%...^.&
9A10:  31 47 04 B8 1A 00 F7 6E  0C 8B F0 C4 5E 06 26 8B   1G.....n ....^.&.
9A20:  40 18 B1 04 D3 E8 8A E0  D0 E4 D0 E4 2A C0 C4 5E   @....... ....*..^
9A30:  0E 26 32 67 05 25 00 04  C4 5E 0E 26 31 47 04 B8   .&2g.%.. .^.&1G..
9A40:  1A 00 F7 6E 0C 8B F0 C4  5E 06 26 8B 40 18 D3 E0   ...n.... ^.&.@...
9A50:  C4 5E 0E 26 32 67 05 25  00 08 C4 5E 0E 26 31 47   .^.&2g.% ...^.&1G
9A60:  04 B8 1A 00 F7 6E 0C 8B  F0 C4 5E 06 26 83 78 04   .....n.. ..^.&.x.
9A70:  FF 75 03 E9 06 00 B8 01  00 E9 03 00 B8 00 00 8A   .u...... ........
9A80:  E0 2A C0 B1 05 D3 E0 C4  5E 0E 26 32 67 05 25 00   .*...... ^.&2g.%.
9A90:  20 C4 5E 0E 26 31 47 04  B8 1A 00 F7 6E 0C 8B F0    .^.&1G. ....n...
9AA0:  C4 5E 06 26 83 78 10 FF  75 03 E9 06 00 B8 01 00   .^.&.x.. u.......
9AB0:  E9 03 00 B8 00 00 8A E0  2A C0 B1 06 D3 E0 C4 5E   ........ *......^
9AC0:  0E 26 32 67 05 25 00 40  C4 5E 0E 26 31 47 04 C4   .&2g.%.@ .^.&1G..
9AD0:  5E 0E 26 81 67 04 FF EF  C4 5E 12 26 81 67 04 FF   ^.&.g... .^.&.g..
9AE0:  EF 83 7E 0A FF 74 03 E9  1E 00 C4 5E 0E 26 81 67   ..~..t.. ...^.&.g
9AF0:  04 00 FE C4 5E 0E 26 81  4F 02 00 FF C4 5E 0E 26   ....^.&. O....^.&
```

```
9B00:  81 4F 02 FF 00 E9 CC 01  B8 1A 00 F7 6E 0A 8B F0   .O...... ....n...
9B10:  C4 5E 06 8B 46 0C 26 39  40 04 74 03 E9 2D 01 B8   .^..F.&9 @.t..-..
9B20:  1A 00 F7 6E 0A 8B F0 C4  5E 06 26 8B 40 06 25 FE   ...n.... ^.&.@.%.
9B30:  01 D1 F8 C4 5E 0E 26 8A  6F 03 2A C9 0B C1 C4 5E   ....^.&. o.*....^
9B40:  0E 26 89 47 02 B8 1A 00  F7 6E 0A 8B F0 C4 5E 06   .&.G.... .n....^.
9B50:  8B 46 0C 26 39 40 10 74  03 E9 ED 00 B8 1A 00 F7   .F.&9@.t ........
9B60:  6E 0A 8B F0 C4 5E 06 26  8B 40 12 25 FE 01 D1 F8   n....^.& .@.%....
9B70:  C4 5E 12 26 8A 6F 03 2A  C9 0B C1 C4 5E 12 26 89   .^.&.o.* ....^.&.
9B80:  47 02 B8 1A 00 F7 6E 0C  8B F0 C4 5E 06 26 8B 40   G.....n. ...^.&.@
9B90:  10 8B C8 B8 1A 00 F7 6E  0C 8B F0 C4 5E 06 26 39   .......n ....^.&9
9BA0:  48 0A 74 03 E9 4E 00 B8  1A 00 F7 6E 0C 8B F0 C4   H.t..N.. ...n....
9BB0:  5E 06 26 8B 40 12 25 FE  01 D1 F8 C4 5E 12 26 8A   ^.&.@.%. ....^.&.
9BC0:  4F 02 80 E1 FF 8A D1 8A  F0 C4 5E 12 26 89 57 02   O....... ..^.&.W.
9BD0:  B8 1A 00 F7 6E 0C 8B F0  C4 5E 06 26 8B 40 14 D1   ....n... .^.&.@..
9BE0:  F8 C4 5E 12 26 33 47 04  25 FF 01 C4 5E 12 26 31   ..^.&3G. %...^.&1
9BF0:  47 04 E9 4B 00 B8 1A 00  F7 6E 0C 8B F0 C4 5E 06   G..K.... .n....^.
9C00:  26 8B 40 06 25 FE 01 D1  F8 C4 5E 12 26 8A 4F 02   &.@.%... ..^.&.O.
9C10:  80 E1 FF 8A D1 8A F0 C4  5E 12 26 89 57 02 B8 1A   ........ ^.&.W...
9C20:  00 F7 6E 0C 8B F0 C4 5E  06 26 8B 40 08 D1 F8 C4   ..n....^ .&.@....
9C30:  5E 12 26 33 47 04 25 FF  01 C4 5E 12 26 31 47 04   ^.&3G.%. ..^.&1G.
9C40:  C4 5E 0E 26 81 4F 04 00  10 E9 3D 00 B8 1A 00 F7   .^.&.O.. ..=.....
9C50:  6E 0A 8B F0 C4 5E 06 8B  46 0C 26 39 40 10 74 03   n....^.. F.&9@.t.
9C60:  E9 26 00 B8 1A 00 F7 6E  0A 8B F0 C4 5E 06 26 8B   .&.....n ....^.&.
9C70:  40 12 25 FE 01 D1 F8 C4  5E 0E 26 8A 6F 03 2A C9   @.%..... ^.&.o.*.
9C80:  0B C1 C4 5E 0E 26 89 47  02 B8 1A 00 F7 6E 0C 8B   ...^.&.G .....n..
9C90:  F0 C4 5E 06 26 8B 40 0C  25 FE 01 D1 F8 C4 5E 0E   ..^.&.@. %.....^.
9CA0:  26 8A 4F 02 80 E1 FF 8A  D1 8A F0 C4 5E 0E 26 89   &.O..... ....^.&.
9CB0:  57 02 B8 1A 00 F7 6E 0C  8B F0 C4 5E 06 26 8B 40   W.....n. ...^.&.@
9CC0:  0E D1 F8 C4 5E 0E 26 33  47 04 25 FF 01 C4 5E 0E   ....^.&3 G.%...^.
9CD0:  26 31 47 04 5E 5F 8B E5  5D CB 55 8B EC 81 EC 02   &1G.^_.. ].U.....
9CE0:  00 57 56 C4 5E 0E 26 C7  07 FF FF C4 5E 06 26 8A   .WV.^.&. ....^.&.
9CF0:  07 2A E4 D1 E0 89 46 FE  8B 46 FE C4 5E 0A 26 89   .*....F. .F..^.&.
9D00:  07 C4 5E 06 26 8A 47 01  2A E4 D1 E0 89 46 FE 8B   ..^.&.G. *....F..
9D10:  46 FE C4 5E 0A 26 89 47  02 C4 5E 06 26 F7 47 04   F..^.&.G ..^.&.G.
9D20:  FF 01 74 03 E9 2E 00 C4  5E 06 26 8A 47 03 2A E4   ..t..... ^.&.G.*.
9D30:  3D FF FF 74 03 E9 1D 00  C4 5E 06 26 8A 47 02 2A   =..t.... .^.&.G.*
9D40:  E4 3D FF FF 74 03 E9 0C  00 C4 5E 0A 26 C7 47 0C   .=..t... ..^.&.G.
9D50:  FF FF E9 46 00 C4 5E 06  26 8A 47 03 2A E4 D1 E0   ...F..^. &.G.*...
9D60:  89 46 FE 8B 46 FE C4 5E  0A 26 89 47 0C C4 5E 0A   .F..F..^ .&.G..^.
9D70:  26 81 7F 0C 68 01 7F 03  E9 09 00 C4 5E 0A 26 C7   &...h... ....^.&.
9D80:  47 0C FF FF C4 5E 06 26  8A 47 02 2A E4 D1 E0 89   G....^.& .G.*....
9D90:  46 FE 8B 46 FE C4 5E 0E  26 89 07 C4 5E 0A 26 C7   F..F..^. &...^.&.
9DA0:  47 06 FF FF C4 5E 0A 26  C7 47 12 FF FF C4 5E 06   G....^.& .G....^.
9DB0:  26 8B 47 04 25 FF 01 D1  E0 89 46 FE 8B 46 FE C4   &.G.%... ..F..F..
9DC0:  5E 0A 26 89 47 0E C4 5E  06 26 8A 47 05 D0 E8 2A   ^.&.G..^ .&.G...*
9DD0:  E4 C4 5E 0A 26 32 47 18  25 01 00 C4 5E 0A 26 31   ..^.&2G. %...^.&1
9DE0:  47 18 C4 5E 06 26 F6 47  05 20 75 03 E9 18 00 C4   G..^.&.G . u.....
9DF0:  5E 06 26 F6 47 05 40 75  03 E9 0B 00 C4 5E 0A 26   ^.&.G.@u .....^.&
9E00:  83 4F 18 08 E9 08 00 C4  5E 0A 26 83 67 18 F7 B1   .O...... ^.&.g...
9E10:  04 C4 5E 06 26 8A 47 05  D0 E8 D0 E8 2A E4 D3 E0   ..^.&.G. ....*...
9E20:  C4 5E 0A 26 32 47 18 25  10 00 C4 5E 0A 26 31 47   .^.&2G.% ...^.&1G
9E30:  18 C4 5E 06 26 8B 47 04  D3 E8 C4 5E 0A 26 32 47   ..^.&.G. ...^.&2G
9E40:  18 25 80 00 C4 5E 0A 26  31 47 18 C4 5E 0A 26 C7   .%...^.& 1G..^.&.
9E50:  47 0A FF FF C4 5E 0A 26  C7 47 04 FF FF C4 5E 0A   G....^.& .G....^.
```

```
9E60:  26 C7 47 10 FF FF C4 5E  0A 26 C7 47 08 FF FF C4   &.G....^ .&.G....
9E70:  5E 0A 26 C7 47 14 FF FF  C4 5E 06 26 8A 47 05 25   ^.&.G... .^.&.G.%
9E80:  10 00 D3 E8 E9 00 00 5E  5F 8B E5 5D CB 55 8B EC   .......^ _..].U..
9E90:  81 EC 20 00 57 56 C4 5E  06 26 8B 47 02 89 46 F8   .. .WV.^ .&.G..F.
9EA0:  C7 46 F4 00 00 FF 76 0C  FF 76 0A FF 76 08 FF 76   .F....v. .v..v..v
9EB0:  06 9A 27 00 63 09 83 C4  08 C7 46 F6 00 00 E9 03   ..'.c... ..F.....
9EC0:  00 FF 46 F6 C4 5E 06 8B  46 F6 26 39 07 7F 03 E9   ..F..^.. F.&9....
9ED0:  CB 00 C7 46 E8 FF FF 8B  76 F6 D1 E6 C4 5E 06 26   ...F.... v....^.&
9EE0:  8B 40 26 89 46 F2 83 7E  F2 FF 75 03 E9 AB 00 8D   .@&.F..~ ..u.....
9EF0:  46 FA 16 50 8D 4E EC 16  51 FF 76 F2 FF 76 E8 8B   F..P.N.. Q.v..v..
9F00:  56 06 8B 5E 08 81 C2 B6  01 53 52 9A 56 01 63 09   V..^.... .SR.V.c.
9F10:  83 C4 10 8B 46 F4 8B C8  D1 E0 03 C1 D1 E0 03 46   ....F... .......F
9F20:  0A 8B 56 0C 05 0A 00 89  46 E4 89 56 E6 FF 46 F4   ..V..... F..V..F.
9F30:  8D 76 EC C4 7E E4 A5 A5  A5 F6 46 F1 10 75 03 E9   .v..~... ..F..u..
9F40:  29 00 8B 46 F4 8B C8 D1  E0 03 C1 D1 E0 03 46 0A   )..F.... ......F.
9F50:  8B 56 0C 05 0A 00 89 46  E0 89 56 E2 FF 46 F4 8D   .V.....F ..V..F..
9F60:  76 FA C4 7E E0 A5 A5 A5  FF 46 F8 FF 76 F2 8B 46   v..~.... .F..v..F
9F70:  06 8B 56 08 05 B6 01 52  50 9A 08 00 73 08 83 C4   ..V....R P...s...
9F80:  06 89 46 F2 B8 1A 00 F7  6E F2 8B F0 C4 5E 06 26   ..F..... n....^.&
9F90:  8B 80 C0 01 89 46 E8 E9  4C FF E9 24 FF 8B 46 F8   .....F.. L..$..F.
9FA0:  8B C8 D1 E0 03 C1 D1 E0  05 0A 00 89 46 EA 8B 46   ........ ....F..F
9FB0:  EA E9 00 00 5E 5F 8B E5  5D CB 55 8B EC 81 EC 42   ....^_.. ].U....B
9FC0:  00 57 56 9A 06 00 63 09  FF 76 08 FF 76 06 FF 76   .WV...c. .v..v..v
9FD0:  0C FF 76 0A 9A D9 00 63  09 83 C4 08 C7 46 E2 00   ..v....c .....F..
9FE0:  00 C7 46 C2 00 00 E9 03  00 FF 46 C2 C4 5E 06 8B   ..F..... ..F..^..
9FF0:  46 C2 26 39 47 02 7F 03  E9 86 00 8D 46 C6 16 50   F.&9G... ....F..P
A000:  8D 46 C8 16 50 8B 46 E2  FF 46 E2 8B C8 D1 E0 03   .F..P.F. .F......
A010:  C1 D1 E0 03 46 0A 8B 56  0C 05 0A 00 52 50 9A AA   ....F..V ....RP..
A020:  04 63 09 83 C4 0C 89 46  C4 83 7E C4 00 75 03 E9   .c.....F ..~..u..
A030:  2B 00 8D 46 E4 16 50 8D  46 E6 16 50 8B 46 E2 FF   +..F..P. F..P.F..
A040:  46 E2 8B C8 D1 E0 03 C1  D1 E0 03 46 0A 8B 56 0C   F....... ...F..V.
A050:  05 0A 00 52 50 9A AA 04  63 09 83 C4 0C FF 76 C4   ...RP... c.....v.
A060:  FF 76 E4 FF 76 C6 8D 46  E6 16 50 8D 46 C8 16 50   .v..v..F ..P.F..P
A070:  FF 76 08 FF 76 06 9A 57  08 63 09 83 C4 12 E9 68   .v..v..W .c.....h
A080:  FF 5E 5F 8B E5 5D CB 55  8B EC 81 EC 08 00 57 56   .^_..].U ......WV
A090:  B8 1A 00 F7 2E 7A 04 8B  F0 C4 5E 06 8B 46 0A 8B   .....z.. ..^..F..
A0A0:  56 0C 1E 8D B8 B6 01 8B  F0 8E DA B9 0D 00 F3 A5   V....... ........
A0B0:  1F C7 46 F8 01 00 C7 46  FC 01 00 83 3E 7C 04 FF   ..F....F ....>|..
A0C0:  75 03 E9 FF 01 B8 1A 00  F7 2E 7C 04 8B F0 C4 5E   u....... ..|....^
A0D0:  06 26 F6 80 CE 01 08 75  03 E9 69 01 B8 1A 00 F7   .&.....u ..i.....
A0E0:  2E 7C 04 8B F0 C4 5E 06  26 83 B8 BA 01 FF 74 03   .|....^. &.....t.
A0F0:  E9 E7 00 B8 1A 00 F7 2E  7C 04 8B F0 C4 5E 06 A1   ........ |....^..
A100:  7A 04 26 89 80 BA 01 B8  1A 00 F7 2E 7C 04 8B F0   z.&..... ....|...
A110:  C4 5E 06 8B 46 12 26 89  80 BC 01 B8 1A 00 F7 2E   .^..F.&. ........
A120:  7A 04 8B F0 C4 5E 06 26  8B 80 C4 01 8B C8 B8 1A   z....^.& ........
A130:  00 F7 2E 7C 04 8B F0 C4  5E 06 26 89 88 BE 01 C7   ...|.... ^.&.....
A140:  46 F8 00 00 83 7E 16 00  75 03 E9 8A 00 B8 1A 00   F....~.. u.......
A150:  F7 2E 7C 04 8B F0 C4 5E  06 A1 7A 04 26 89 80 C6   ..|....^ ..z.&...
A160:  01 B8 1A 00 F7 2E 7C 04  8B F0 C4 5E 06 8B 46 14   ......|. ...^..F.
A170:  26 89 80 C8 01 C4 5E 0E  26 8B 47 0E 8B C8 B8 1A   &.....^. &.G.....
A180:  00 F7 2E 7C 04 8B F0 C4  5E 06 26 89 88 CA 01 B8   ...|.... ^.&.....
A190:  1A 00 F7 2E 7A 04 8B F0  C4 5E 06 A1 7C 04 26 89   ....z... .^..|.&.
A1A0:  80 C6 01 C4 5E 0E 26 8B  47 0E 8B C8 B8 1A 00 F7   ....^.&. G.......
A1B0:  2E 7A 04 8B F0 C4 5E 06  26 89 88 CA 01 C4 5E 0E   .z....^. &.....^.
```

```
A1C0:  26 8B 47 0C 8B C8 B8 1A  00 F7 2E 7A 04 8B F0 C4   &.G..... ...z....
A1D0:  5E 06 26 89 88 C8 01 E9  68 00 B8 1A 00 F7 2E 7C   ^.&..... h......|
A1E0:  04 8B F0 C4 5E 06 26 83  B8 C6 01 FF 74 03 E9 51   ....^.&. ....t..Q
A1F0:  00 B8 1A 00 F7 2E 7C 04  8B F0 C4 5E 06 A1 7A 04   ......|. ...^..z.
A200:  26 89 80 C6 01 B8 1A 00  F7 2E 7C 04 8B F0 C4 5E   &....... ..|....^
A210:  06 8B 46 12 26 89 80 C8  01 B8 1A 00 F7 2E 7A 04   ..F.&... ......z.
A220:  8B F0 C4 5E 06 26 8B 80  C4 01 8B C8 B8 1A 00 F7   ...^.&.. ........
A230:  2E 7C 04 8B F0 C4 5E 06  26 89 88 CA 01 C7 46 F8   .|....^. &.....F.
A240:  00 00 E9 7F 00 B8 1A 00  F7 2E 7C 04 8B F0 C4 5E   ........ ..|....^
A250:  06 26 83 B8 BA 01 FF 74  03 E9 68 00 B8 1A 00 F7   .&.....t ..h.....
A260:  2E 7C 04 8B F0 C4 5E 06  26 83 B8 C0 01 FF 74 03   .|....^. &.....t.
A270:  E9 51 00 B8 1A 00 F7 2E  7C 04 8B F0 C4 5E 06 A1   .Q...... |....^..
A280:  7A 04 26 89 80 BA 01 B8  1A 00 F7 2E 7C 04 8B F0   z.&..... ....|...
A290:  C4 5E 06 8B 46 12 26 89  80 BC 01 B8 1A 00 F7 2E   .^..F.&. ........
A2A0:  7A 04 8B F0 C4 5E 06 26  8B 80 C4 01 8B C8 B8 1A   z....^.& ........
A2B0:  00 F7 2E 7C 04 8B F0 C4  5E 06 26 89 88 BE 01 C7   ...|.... ^.&.....
A2C0:  46 F8 00 00 83 7E F8 00  74 03 E9 08 00 C7 46 FC   F....~.. t.....F.
A2D0:  00 00 E9 A3 00 83 3E 7C  04 FF 75 03 E9 99 00 B8   ......>| ..u.....
A2E0:  1A 00 F7 2E 7C 04 8B F0  C4 5E 06 26 8B 80 C0 01   ....|... .^.&....
A2F0:  A3 7C 04 B8 1A 00 F7 2E  7C 04 8B F0 C4 5E 06 26   .|...... |....^.&
A300:  83 B8 C6 01 FF 74 03 E9  6B 00 B8 1A 00 F7 2E 7C   .....t.. k......|
A310:  04 8B F0 C4 5E 06 26 F6  80 CE 01 08 75 03 E9 54   ....^.&. ....u..T
A320:  00 B8 1A 00 F7 2E 7C 04  8B F0 C4 5E 06 A1 7A 04   ......|. ...^..z.
A330:  26 89 80 C6 01 B8 1A 00  F7 2E 7C 04 8B F0 C4 5E   &....... ..|....^
A340:  06 8B 46 12 26 89 80 C8  01 B8 1A 00 F7 2E 7A 04   ..F.&... ......z.
A350:  8B F0 C4 5E 06 26 8B 80  C4 01 8B C8 B8 1A 00 F7   ...^.&.. ........
A360:  2E 7C 04 8B F0 C4 5E 06  26 89 88 CA 01 C7 46 FC   .|....^. &.....F.
A370:  00 00 E9 03 00 E9 5D FF  83 7E FC 00 75 03 E9 2A   ......]. .~..u..*
A380:  00 A1 7A 04 FF 06 78 04  8B 36 78 04 D1 E6 C4 5E   ..z...x. .6x....^
A390:  06 26 89 40 26 B8 1A 00  F7 2E 7A 04 8B F0 C4 5E   .&.@&... ..z....^
A3A0:  06 26 C7 80 C0 01 FF FF  E9 14 00 B8 1A 00 F7 2E   .&...... ........
A3B0:  7A 04 8B F0 C4 5E 06 A1  7C 04 26 89 80 C0 01 B8   z....^.. |.&.....
A3C0:  1A 00 F7 2E 7A 04 8B F0  C4 5E 06 A1 78 04 26 89   ....z... .^..x.&.
A3D0:  80 CC 01 A1 7A 04 FF 06  7A 04 A3 7C 04 5E 5F 8B   ....z... z..|.^_.
A3E0:  E5 5D CB 55 8B EC 81 EC  00 00 57 56 C7 06 78 04   .].U.... ..WV..x.
A3F0:  FF FF C7 06 7A 04 00 00  C7 06 7C 04 FF FF 5E 5F   ....z... ..|...^_
A400:  8B E5 5D CB 55 8B EC 81  EC 14 00 57 56 83 7E 06   ..].U... ...WV.~.
A410:  00 75 03 E9 19 00 9A 23  04 20 0A 3D 00 00 75 03   .u.....# . .=..u.
A420:  E9 09 00 B8 00 00 BA 00  00 E9 F1 01 E9 3F 00 C7   ........ .....?..
A430:  46 EE 01 00 E9 03 00 FF  46 EE 83 7E EE 06 7C 03   F....... F..~..|.
A440:  E9 2B 00 FF 76 0E FF 76  0C FF 76 0A FF 76 08 FF   .+..v..v ..v..v..
A450:  76 EE 9A 23 02 20 0A 83  C4 0A 3D 00 00 75 03 E9   v..#. .. ..=..u..
A460:  09 00 B8 00 00 BA 00 00  E9 B2 01 E9 C9 FF FF 36   ........ .......6
A470:  46 0C FF 36 44 0C 9A 64  1D E5 0A 83 C4 04 FF 36   F..6D..d .......6
A480:  46 0C FF 36 44 0C 8B F0  9A 64 1D E5 0A 83 C4 04   F..6D... .d......
A490:  8B C8 80 C1 08 D3 E6 89  76 EC FF 36 46 0C FF 36   ........ v..6F..6
A4A0:  44 0C B8 04 00 50 B8 02  00 50 8D 46 F6 16 50 9A   D....P.. .P.F..P.
A4B0:  8C 07 E5 0A 83 C4 0C FF  36 46 0C FF 36 44 0C 9A   ........ 6F..6D..
A4C0:  64 1D E5 0A 83 C4 04 3D  0A 00 75 03 E9 03 00 E9   d......= ..u.....
A4D0:  E5 FF 83 7E 10 00 75 03  E9 5B 00 8E 06 1C 0B 26   ...~..u. .[.....&
A4E0:  FF 36 88 01 8E 06 1E 0B  26 FF 36 86 01 9A 65 08   .6...... &.6...e.
A4F0:  20 0A 83 C4 04 8E 06 20  0B 26 A3 5A 6C 26 89 16    ...... .&.Zl&..
A500:  5C 6C 26 A1 5C 6C 26 0B  06 5A 6C 74 03 E9 26 00   \l&.\l&. .Zlt..&.
A510:  B8 7E 04 1E 50 9A 96 0A  E5 0A 83 C4 04 FF 36 46   .~..P... ......6F
```

```
A520:  0C FF 36 44 0C 9A 36 06  E5 0A 83 C4 04 B8 00 00   ..6D..6. ........
A530:  BA 00 00 E9 E7 00 2B C0  89 46 F4 89 46 F2 C7 46   ......+. .F..F..F
A540:  EE 00 00 E9 12 00 FF 46  EE 8E 06 1E 0B 26 A1 86   .......F .....&..
A550:  01 99 01 46 F2 11 56 F4  8E 06 1C 0B 8B 46 EE 26   ...F..V. .....F.&
A560:  39 06 88 01 7F 03 E9 78  00 FF 36 46 0C FF 36 44   9......x ..6F..6D
A570:  0C 8E 06 1E 0B 26 FF 36  86 01 B8 01 00 50 8B 46   .....&.6 .....P.F
A580:  F2 8B 56 F4 8E 06 20 0B  26 03 06 5A 6C 83 D2 00   ..V... . &..Zl...
A590:  B9 0C 00 D3 E2 26 03 16  5C 6C 52 50 9A 8C 07 E5   .....&.. \lRP....
A5A0:  0A 83 C4 0C 89 46 F0 8E  06 1E 0B 8B 46 F0 26 39   .....F.. ....F.&9
A5B0:  06 86 01 7F 03 E9 26 00  FF 36 46 0C FF 36 44 0C   ......&. .6F..6D.
A5C0:  9A 36 06 E5 0A 83 C4 04  B8 93 04 1E 50 9A 96 0A   .6...... ....P...
A5D0:  E5 0A 83 C4 04 B8 00 00  BA 00 00 E9 3F 00 E9 65   ........ ....?..e
A5E0:  FF FF 36 46 0C FF 36 44  0C 9A 36 06 E5 0A 83 C4   ..6F..6D ..6.....
A5F0:  04 8E 06 1E 0B 26 A1 86  01 C4 5E 12 26 89 07 8E   .....&.. ..^.&...
A600:  06 1C 0B 26 A1 88 01 C4  5E 16 26 89 07 8E 06 20   ...&.... ^.&....
A610:  0B 26 A1 5A 6C 26 8B 16  5C 6C E9 00 00 5E 5F 8B   .&.Zl&.. \l...^_.
A620:  E5 5D CB 55 8B EC 81 EC  06 00 57 56 C7 46 FA 00   .].U.... ..WV.F..
A630:  00 8B 46 06 E9 BF 01 83  7E 0C 00 7D 03 E9 0A 00   ..F..... ..}....
A640:  81 7E 0C 00 04 7F 03 E9  15 00 FF 76 0C B8 ED 04   ........ ...v....
A650:  1E 50 9A 96 0A E5 0A 83  C4 06 C7 46 FA 01 00 E9   .P...... ...F....
A660:  B5 01 83 7E 0E 00 7D 03  E9 0A 00 81 7E 0E 00 04   ......}. ........
A670:  7F 03 E9 15 00 FF 76 0E  B8 0A 05 1E 50 9A 96 0A   ......v. ....P...
A680:  E5 0A 83 C4 06 C7 46 FA  01 00 E9 8A 01 B8 27 05   ......F. ......'.
A690:  1E 50 FF 76 0A FF 76 08  9A 30 07 E5 0A 83 C4 08   .P.v..v. .0......
A6A0:  A3 44 0C 89 16 46 0C A1  46 0C 0B 06 44 0C 74 03   .D...F.. F...D.t.
A6B0:  E9 18 00 FF 76 0A FF 76  08 B8 2A 05 1E 50 9A 96   ....v..v ..*..P..
A6C0:  0A E5 0A 83 C4 08 C7 46  FA 01 00 E9 49 01 FF 36   .......F ....I..6
A6D0:  46 0C FF 36 44 0C 9A 64  1D E5 0A 83 C4 04 FF 36   F..6D..d .......6
A6E0:  46 0C FF 36 44 0C 9A 64  1D E5 0A 83 C4 04 FF 36   F..6D..d .......6
A6F0:  46 0C FF 36 44 0C 9A 64  1D E5 0A 83 C4 04 89 46   F..6D..d .......F
A700:  FE FF 36 46 0C FF 36 44  0C 9A 64 1D E5 0A 83 C4   ..6F..6D ..d.....
A710:  04 8A E0 2A C0 01 46 FE  8E 06 1E 0B 26 83 3E 86   ...*..F. ....&.>.
A720:  01 00 74 03 E9 07 00 8B  46 FE 26 A3 86 01 A1 DE   ..t..... F.&.....
A730:  04 39 46 FE 7E 03 E9 11  00 8E 06 1E 0B 8B 46 FE   .9F..... ......F.
A740:  26 39 06 86 01 75 03 E9  2E 00 8E 06 1E 0B 26 FF   &9...u.. ......&.
A750:  36 86 01 FF 76 FE B8 3D  05 1E 50 9A 96 0A E5 0A   6...v..= ..P.....
A760:  83 C4 08 FF 36 46 0C FF  36 44 0C 9A 36 06 E5 0A   ....6F.. 6D..6...
A770:  83 C4 04 C7 46 FA 01 00  E9 9C 00 FF 36 46 0C FF   ....F... ....6F..
A780:  36 44 0C 9A 64 1D E5 0A  83 C4 04 89 46 FC FF 36   6D..d... ....F..6
A790:  46 0C FF 36 44 0C 9A 64  1D E5 0A 83 C4 04 8A E0   F..6D..d ........
A7A0:  2A C0 01 46 FC 8E 06 1C  0B 26 83 3E 88 01 00 74   *..F.... .&.>...t
A7B0:  03 E9 07 00 8B 46 FC 26  A3 88 01 A1 E0 04 39 46   .....F.& ......9F
A7C0:  FC 7E 03 E9 11 00 8E 06  1C 0B 8B 46 FC 26 39 06   ........ ...F.&9.
A7D0:  88 01 75 03 E9 19 00 8E  06 1C 0B 26 FF 36 88 01   ..u..... ...&.6..
A7E0:  FF 76 FC B8 70 05 1E 50  9A 96 0A E5 0A 83 C4 08   .v..p..P ........
A7F0:  E9 24 00 E9 21 00 48 75  03 E9 3B FE 48 75 03 E9   .$..!.Hu ..;.Hu..
A800:  60 FE 48 75 03 E9 85 FE  48 75 03 E9 C0 FE 48 75   `.Hu.... Hu....Hu
A810:  03 E9 67 FF E9 00 00 8B  46 FA E9 00 00 5E 5F 8B   ..g..... F....^_.
A820:  E5 5D CB 55 8B EC 81 EC  00 00 57 56 B8 00 00 E9   .].U.... ..WV....
A830:  00 00 5E 5F 8B E5 5D CB  55 8B EC 81 EC 0A 02 57   ..^_..]. U......W
A840:  56 B8 A0 05 1E 50 FF 76  08 FF 76 06 9A 30 07 E5   V....P.v ..v..0..
A850:  0A 83 C4 08 89 46 F8 89  56 FA FF 76 FA FF 76 F8   .....F.. V..v..v.
A860:  B8 A3 05 1E 50 9A E4 26  E5 0A 83 C4 08 FF 76 FA   ....P..& ......v.
A870:  FF 76 F8 FF 76 0E 9A 34  1D E5 0A 83 C4 06 FF 76   .v..v..4 .......v
```

```
A880:  FA FF 76 F8 8A 46 0F 98  50 9A 34 1D E5 0A 83 C4   ..v..F.. P.4.....
A890:  06 FF 76 FA FF 76 F8 FF  76 10 9A 34 1D E5 0A 83   ..v..v.. v..4....
A8A0:  C4 06 FF 76 FA FF 76 F8  8A 46 11 98 50 9A 34 1D   ...v..v. .F..P.4.
A8B0:  E5 0A 83 C4 06 C7 86 F6  FD 00 00 E9 04 00 FF 86   ........ ........
A8C0:  F6 FD 83 BE F6 FD 0A 7C  03 E9 15 00 FF 76 FA FF   .......| .....v..
A8D0:  76 F8 B8 00 00 50 9A 34  1D E5 0A 83 C4 06 E9 DD   v....P.4 ........
A8E0:  FF FF 76 FA FF 76 F8 B8  20 00 50 9A 34 1D E5 0A   ..v..v..  .P.4...
A8F0:  83 C4 06 FF 76 FA FF 76  F8 B8 0A 00 50 9A 34 1D   ....v..v ....P.4.
A900:  E5 0A 83 C4 06 8B 46 0A  8B 56 0C 89 46 FC 89 56   ......F. .V..F..V
A910:  FE C7 86 F6 FD 00 00 E9  04 00 FF 86 F6 FD 8B 46   ........ .......F
A920:  10 39 86 F6 FD 7C 03 E9  4A 00 FF 76 0E FF 76 FE   .9...|.. J..v..v.
A930:  FF 76 FC 8D 86 F8 FD 16  50 9A E0 28 E5 0A 83 C4   .v...... P..(....
A940:  0A FF 76 FA FF 76 F8 FF  76 0E B8 01 00 50 8D 86   ..v..v.. v....P..
A950:  F8 FD 16 50 9A FE 08 E5  0A 83 C4 0C 8B 46 0E 99   ...P.... .....F..
A960:  2B DB 8B C8 01 4E FC 13  DA B9 0C 00 D3 E3 01 5E   +....N.. .......^
A970:  FE E9 A6 FF FF 76 FA FF  76 F8 9A 36 06 E5 0A 83   .....v.. v..6....
A980:  C4 04 5E 5F 8B E5 5D CB  55 8B EC 81 EC 00 00 57   ..^_..]. U......W
A990:  56 A1 B8 04 2B 06 BA 04  8E 06 1E 0B 26 A3 86 01   V...+... ....&...
A9A0:  A1 BC 04 2B 06 BE 04 8E  06 1C 0B 26 A3 88 01 5E   ...+.... ...&...^
A9B0:  5F 8B E5 5D CB 55 8B EC  81 EC 00 00 57 56 8E 06   _..].U.. ....WV..
A9C0:  1E 0B 26 A1 86 01 C4 5E  06 26 89 07 8E 06 1C 0B   ..&....^ .&......
A9D0:  26 A1 88 01 C4 5E 0A 26  89 07 5E 5F 8B E5 5D CB   &....^.& ..^_..].
A9E0:  55 8B EC 81 EC 76 00 57  56 8D 7E F4 BE A6 05 8C   U....v.W V.~.....
A9F0:  D0 8E C0 B9 06 00 F3 A5  C6 46 8A 00 B8 B2 05 1E   ........ .F......
AA00:  50 8D 46 F4 16 50 9A 30  07 E5 0A 83 C4 08 89 46   P.F..P.0 .......F
AA10:  F0 89 56 F2 0B D0 75 03  E9 0D 01 80 7E 8A 21 75   ..V...u. ....~.!u
AA20:  03 E9 1A 00 FF 76 F2 FF  76 F0 B8 64 00 50 8D 46   .....v.. v..d.P.F
AA30:  8A 16 50 9A 6A 26 E5 0A  83 C4 0A E9 DD FF FF 76   ..P.j&.. .......v
AA40:  08 FF 76 06 B8 B5 05 1E  50 8D 46 8B 16 50 9A B2   ..v..... P.F..P..
AA50:  27 E5 0A 83 C4 0C C7 46  EE 00 00 C4 5E 06 8B 46   '......F ....^..F
AA60:  EE 26 39 07 75 03 E9 72  00 C6 46 8A 00 80 7E 8A   .&9.u..r ..F...~.
AA70:  21 75 03 E9 4B 00 FF 76  F2 FF 76 F0 B8 64 00 50   !u..K..v ..v..d.P
AA80:  8D 46 8A 16 50 9A 6A 26  E5 0A 83 C4 0A C4 5E F0   .F..P.j& ......^.
AA90:  26 F6 47 0A 10 75 03 E9  24 00 8D 46 F4 16 50 C4   &.G..u.. $..F..P.
AAA0:  5E 06 26 FF 37 B8 B9 05  1E 50 9A 96 0A E5 0A 83   ^.&.7... .P......
AAB0:  C4 0A B8 F5 FF 50 9A D7  01 E5 0A 83 C4 02 E9 AC   .....P.. ........
AAC0:  FF 8D 46 EE 16 50 B8 D8  05 1E 50 8D 46 8B 16 50   ..F..P.. ..P.F..P
AAD0:  9A B2 27 E5 0A 83 C4 0C  E9 80 FF FF 76 20 FF 76   ..'..... ....v .v
AAE0:  1E FF 76 1C FF 76 1A FF  76 18 FF 76 16 FF 76 14   ..v..v.. v..v..v.
AAF0:  FF 76 12 FF 76 10 FF 76  0E FF 76 0C FF 76 0A FF   .v..v..v ..v..v..
AB00:  76 08 FF 76 06 B8 DC 05  1E 50 8D 46 8B 16 50 9A   v..v.... .P.F..P.
AB10:  B2 27 E5 0A 83 C4 24 FF  76 F2 FF 76 F0 9A 36 06   .'....$. v..v..6.
AB20:  E5 0A 83 C4 04 E9 1E 00  8D 46 F4 16 50 B8 F8 05   ........ .F..P...
AB30:  1E 50 9A 96 0A E5 0A 83  C4 08 B8 FF FF 50 9A D7   .P...... .....P..
AB40:  01 E5 0A 83 C4 02 5E 5F  8B E5 5D CB 55 8B EC 81   ......^_ ..].U...
AB50:  EC 02 00 57 56 8D 46 FE  16 50 B8 BE 04 1E 50 B8   ...WV.F. .P....P.
AB60:  BC 04 1E 50 B8 BA 04 1E  50 B8 B8 04 1E 50 B8 8A   ...P.... P....P..
AB70:  01 B9 FA 1D 51 50 B8 A8  89 B9 9E 0D 51 50 9A E0   ....QP.. ....QP..
AB80:  05 20 0A 83 C4 1C 9A 9B  07 20 0A 9A 88 05 20 0A   . ...... . .... .
AB90:  9A 53 00 85 06 5E 5F 8B  E5 5D CB 55 8B EC 81 EC   .S...^_. .].U....
ABA0:  00 00 57 56 8E 06 22 0B  26 A1 A8 89 E9 42 00 B8   ..WV..". &....B..
ABB0:  07 06 1E 50 B8 C0 04 1E  50 9A D6 25 E5 0A 83 C4   ...P.... P..%....
ABC0:  08 E9 44 00 B8 17 06 1E  50 B8 C0 04 1E 50 9A D6   ..D..... P....P..
ABD0:  25 E5 0A 83 C4 08 E9 2F  00 B8 27 06 1E 50 B8 C0   %....../ ..'..P..
```

MATCH.DMP Thursday, January 6, 1994 12:04pm Page 52


```
ABE0:  04 1E 50 9A D6 25 E5 0A  83 C4 08 E9 1A 00 E9 17   ..P..%.. ........
ABF0:  00 48 48 75 03 E9 B7 FF  48 48 75 03 E9 C5 FF 48   .HHu.... HHu....H
AC00:  75 03 E9 D4 FF E9 00 00  5E 5F 8B E5 5D CB 55 8B   u....... ^_..].U.
AC10:  EC 81 EC 00 00 57 56 B8  39 06 1E 50 B8 C0 04 1E   .....WV. 9..P....
AC20:  50 9A D6 25 E5 0A 83 C4  08 5E 5F 8B E5 5D CB 55   P..%.... .^_..].U
AC30:  8B EC 81 EC 00 00 57 56  FF 76 08 FF 76 06 9A 65   ......WV .v..v..e
AC40:  08 20 0A 83 C4 04 8E 06  20 0B 26 A3 5A 6C 26 89   . ......  .&.Zl&.
AC50:  16 5C 6C 26 A1 5A 6C 26  8B 16 5C 6C E9 00 00 5E   .\l&.Zl& ..\l...^
AC60:  5F 8B E5 5D CB 55 8B EC  81 EC 00 00 57 56 B8 01   _..].U.. ....WV..
AC70:  00 50 8B 46 08 F7 6E 06  52 50 9A 0A 28 E5 0A 83   .P.F..n. RP..(...
AC80:  C4 06 E9 00 00 5E 5F 8B  E5 5D CB 55 8B EC 81 EC   .....^_. .].U....
AC90:  00 00 57 56 8E 06 20 0B  26 FF 36 5C 6C 26 FF 36   ..WV.. . &.6\l&.6
ACA0:  5A 6C 9A FE 27 E5 0A 83  C4 04 5E 5F 8B E5 5D CB   Zl..'... ..^_..].
ACB0:  55 8B EC 81 EC 00 00 57  56 FF 36 4A 0C FF 36 48   U......W V.6J..6H
ACC0:  0C B8 01 00 50 B9 02 00  51 FF 76 08 FF 76 06 9A   ....P... Q.v..v..
ACD0:  FE 08 E5 0A 83 C4 0C FF  36 4A 0C FF 36 48 0C B8   ........ 6J..6H..
ACE0:  01 00 50 B9 02 00 51 8B  56 06 8B 5E 08 83 C2 02   ..P...Q. V..^....
ACF0:  53 52 9A FE 08 E5 0A 83  C4 0C FF 36 4A 0C FF 36   SR...... ...6J..6
AD00:  48 0C B8 01 00 50 B8 02  00 50 8B 46 06 8B 56 08   H....P.. .P.F..V.
AD10:  05 04 00 52 50 9A FE 08  E5 0A 83 C4 0C 5E 5F 8B   ...RP... .....^_.
AD20:  E5 5D CB 55 8B EC 81 EC  00 00 57 56 FF 36 4A 0C   .].U.... ..WV.6J.
AD30:  FF 36 48 0C B8 01 00 50  B9 02 00 51 FF 76 08 FF   .6H....P ...Q.v..
AD40:  76 06 9A FE 08 E5 0A 83  C4 0C FF 36 4A 0C FF 36   v....... ...6J..6
AD50:  48 0C B8 01 00 50 B8 04  00 50 8B 46 06 8B 56 08   H....P.. .P.F..V.
AD60:  05 02 00 52 50 9A FE 08  E5 0A 83 C4 0C B8 00 00   ...RP... ........
AD70:  E9 00 00 5E 5F 8B E5 5D  CB 55 8B EC 81 EC 1C 00   ...^_..] .U......
AD80:  57 56 9A 06 00 63 09 FF  76 08 FF 76 06 9A 00 00   WV...c.. v..v....
AD90:  AB 0A 83 C4 04 C7 46 E4  00 00 E9 03 00 FF 46 E4   ......F. ......F.
ADA0:  B1 07 C4 5E 06 26 8B 07  D3 E8 3B 46 E4 77 03 E9   ...^.&.. ..;F.w..
ADB0:  21 00 8B 46 E4 8B C8 D1  E0 03 C1 D1 E0 03 46 06   !..F.... ......F.
ADC0:  8B 56 08 05 0A 00 52 50  9A 73 00 AB 0A 83 C4 04   .V....RP .s......
ADD0:  E9 CA FF B8 00 00 E9 00  00 5E 5F 8B E5 5D CB 55   ........ .^_..].U
ADE0:  8B EC 81 EC 1C 00 57 56  9A 06 00 63 09 FF 76 08   ......WV ...c..v.
ADF0:  FF 76 06 9A 95 01 AB 0A  83 C4 04 C7 46 E4 00 00   .v...... ....F...
AE00:  E9 03 00 FF 46 E4 B1 07  C4 5E 06 26 8B 07 D3 E8   ....F... .^.&....
AE10:  3B 46 E4 77 03 E9 21 00  8B 46 E4 8B C8 D1 E0 03   ;F.w..!. .F......
AE20:  C1 D1 E0 03 46 06 8B 56  08 05 0A 00 52 50 9A 0E   ....F..V ....RP..
AE30:  02 AB 0A 83 C4 04 E9 CA  FF B8 00 00 E9 00 00 5E   ........ .......^
AE40:  5F 8B E5 5D CB 55 8B EC  81 EC 00 00 57 56 FF 36   _..].U.. ....WV.6
AE50:  4A 0C FF 36 48 0C B8 01  00 50 B9 02 00 51 FF 76   J..6H... .P...Q.v
AE60:  08 FF 76 06 9A 8C 07 E5  0A 83 C4 0C FF 36 4A 0C   ..v..... .....6J.
AE70:  FF 36 48 0C B8 01 00 50  B9 02 00 51 8B 56 06 8B   .6H....P ...Q.V..
AE80:  5E 08 83 C2 02 53 52 9A  8C 07 E5 0A 83 C4 0C FF   ^....SR. ........
AE90:  36 4A 0C FF 36 48 0C B8  01 00 50 B8 02 00 50 8B   6J..6H.. ..P...P.
AEA0:  46 06 8B 56 08 05 04 00  52 50 9A 8C 07 E5 0A 83   F..V.... RP......
AEB0:  C4 0C B8 00 00 E9 00 00  5E 5F 8B E5 5D CB 55 8B   ........ ^_..].U.
AEC0:  EC 81 EC 00 00 57 56 FF  36 4A 0C FF 36 48 0C B8   .....WV. 6J..6H..
AED0:  01 00 50 B9 02 00 51 FF  76 08 FF 76 06 9A 8C 07   ..P...Q. v..v....
AEE0:  E5 0A 83 C4 0C FF 36 4A  0C FF 36 48 0C B8 01 00   ......6J ..6H....
AEF0:  50 B8 04 00 50 8B 46 06  8B 56 08 05 02 00 52 50   P...P.F. .V....RP
AF00:  9A 8C 07 E5 0A 83 C4 0C  B8 00 00 E9 00 00 5E 5F   ........ ......^_
AF10:  8B E5 5D CB 55 8B EC 81  EC 4A 07 57 56 FF 76 08   ..].U... .J.WV.v.
AF20:  FF 76 06 B8 40 06 1E 50  B8 48 06 1E 50 8D 86 BC   .v..@..P .H..P...
AF30:  F8 16 50 9A 46 27 E5 0A  83 C4 10 B8 51 06 1E 50   ..P.F'.. ....Q..P
```

```
AF40:  8D 86 BC F8 16 50 9A 30  07 E5 0A 83 C4 08 89 86   .....P.0 ........
AF50:  B8 F8 89 96 BA F8 0B D0  74 03 E9 06 00 B8 FF FF   ........ t.......
AF60:  E9 4C 00 8D 86 EE F8 16  50 FF 76 0C FF 76 0A 9A   .L...... P.v..v..
AF70:  5D 06 63 09 83 C4 08 89  86 B6 F8 FF B6 BA F8 FF   ].c..... ........
AF80:  B6 B8 F8 FF B6 B6 F8 B8  01 00 50 8D 86 EE F8 16   ........ ..P.....
AF90:  50 9A FE 08 E5 0A 83 C4  0C FF B6 BA F8 FF B6 B8   P....... ........
AFA0:  F8 9A 36 06 E5 0A 83 C4  04 B8 00 00 E9 00 00 5E   ..6..... .......^
AFB0:  5F 8B E5 5D CB 55 8B EC  81 EC 48 07 57 56 FF 76   _..].U.. ..H.WV.v
AFC0:  08 FF 76 06 B8 40 06 1E  50 B8 54 06 1E 50 8D 86   ..v..@.. P.T..P..
AFD0:  BC F8 16 50 9A 46 27 E5  0A 83 C4 10 B8 5D 06 1E   ...P.F'. .....]..
AFE0:  50 8D 86 BC F8 16 50 9A  30 07 E5 0A 83 C4 08 89   P.....P. 0.......
AFF0:  86 B8 F8 89 96 BA F8 0B  D0 74 03 E9 06 00 B8 FF   ........ .t......
B000:  FF E9 48 00 FF B6 BA F8  FF B6 B8 F8 B8 B8 0B 50   ..H..... .......P
B010:  B8 01 00 50 8D 86 EE F8  16 50 9A 8C 07 E5 0A 83   ...P.... .P......
B020:  C4 0C 8D 86 EE F8 16 50  FF 76 0C FF 76 0A 9A 8A   .......P .v..v...
B030:  07 63 09 83 C4 08 FF B6  BA F8 FF B6 B8 F8 9A 36   .c...... .......6
B040:  06 E5 0A 83 C4 04 B8 00  00 E9 00 00 5E 5F 8B E5   ........ ....^_..
B050:  5D CB 00 10 00 B1 B4 30  CD 21 3C 02 73 05 33 C0   ]......0 .!<.s.3.
B060:  06 50 CB BF FA 1D 8B 36  02 00 2B F7 81 FE 00 10   .P.....6 ..+.....
B070:  72 03 BE 00 10 FA 8E D7  81 C4 6E 0E FB 73 12 16   r....... ..n..s..
B080:  1F 0E E8 59 02 33 C0 50  0E E8 3B 05 B8 FF 4C CD   ...Y.3.P ..;...L.
B090:  21 8B C6 B1 04 D3 E0 48  36 A3 64 06 BB 66 06 36   !......H 6.d..f.6
B0A0:  8C 17 83 E4 FE 36 89 67  04 B8 FE FF 50 36 89 67   .....6.g ....P6.g
B0B0:  0A F7 D0 50 36 89 67 06  36 89 67 08 36 89 26 60   ...P6.g. 6.g.6.&`
B0C0:  06 03 F7 89 36 02 00 8C  C3 2B DE F7 DB B4 4A CD   ....6... .+....J.
B0D0:  21 36 8C 1E A0 06 16 07  FC BF 08 0C B9 70 0E 2B   !6...... .....p.+
B0E0:  CF 33 C0 F3 AA 16 1F 8B  0E 88 0A E3 02 FF D1 9A   .3...... ........
B0F0:  B8 04 E5 0A 9A 0A 03 E5  0A 33 ED 9A 12 01 E5 0A   ........ .3......
B100:  16 1F FF 36 C5 06 FF 36  C3 06 FF 36 C1 06 FF 36   ...6...6 ...6...6
B110:  BF 06 FF 36 BD 06 9A 00  00 00 00 50 0E E8 FB 00   ...6.... ...P....
B120:  C3 2E A1 0F 01 8E D8 B8  03 00 36 C7 06 62 06 D7   ........ ..6..b..
B130:  01 50 0E E8 A8 01 0E E8  8D 04 36 81 3E 8A 0A D6   .P...... ..6.>...
B140:  D6 75 07 58 50 36 FF 16  8E 0A B8 FF 00 50 0E FF   .u.XP6.. .....P..
B150:  16 62 06 FA 1D 00 B8 00  35 CD 21 89 1E 8C 06 8C   .b...... 5.!.....
B160:  06 8E 06 0E 1F B8 00 25  BA DD 00 CD 21 16 1F 8B   .......% ....!...
B170:  0E 9C 0A E3 2E 8E 06 A0  06 26 8B 36 2C 00 C5 06   ........ .&.6,...
B180:  9E 0A 8C DA 33 DB 36 FF  1E 9A 0A 73 05 16 1F E9   ....3.6. ...s....
B190:  6E 01 36 C5 06 A2 0A 8C  DA BB 03 00 36 FF 1E 9A   n.6..... ....6...
B1A0:  0A 16 1F 8E 06 A0 06 26  8B 0E 2C 00 E3 3E 8E C1   .......& ..,..>..
B1B0:  33 FF 26 80 3D 00 74 34  B9 0D 00 BE 7E 06 F3 A6   3.&.=.t4 ....~...
B1C0:  74 0B B9 FF 7F 33 C0 F2  AE 75 21 EB E5 06 1E 07   t....3.. .u!.....
B1D0:  1F 8B F7 BF A9 06 B1 04  AC 2C 41 72 0D D2 E0 92   ........ .,Ar....
B1E0:  AC 2C 41 72 05 0A C2 AA  EB EE 16 1F BB 04 00 80   .,Ar.... ........
B1F0:  A7 A9 06 BF B8 00 44 CD  21 72 0A F6 C2 80 74 05   ......D. !r....t.
B200:  80 8F A9 06 40 4B 79 E7  BE A6 0A BF A6 0A E8 BA   ....@Ky. ........
B210:  00 BE A6 0A BF A6 0A E8  B1 00 CB 55 8B EC 33 C9   ........ ...U..3.
B220:  EB 1A 55 8B EC B9 01 00  EB 12 55 8B EC 56 57 B9   ..U..... ..U..VW.
B230:  00 01 EB 08 55 8B EC 56  57 B9 01 01 51 0A C9 75   ....U..V W...Q..u
B240:  1E BE 64 0C BF 64 0C E8  81 00 BE A6 0A BF AA 0A   ..d..d.. ........
B250:  E8 78 00 81 3E 8A 0A D6  D6 75 04 FF 16 90 0A BE   .x..>... .u......
B260:  AA 0A BF AA 0A E8 63 00  BE AA 0A BF AA 0A E8 5A   ......c. .......Z
B270:  00 9A E6 02 E5 0A 0B C0  74 11 58 0A E4 50 75 0B   ........ t.X..Pu.
B280:  83 7E 06 00 75 05 C7 46  06 FF 00 E8 10 00 58 0A   .~..u..F ......X.
B290:  E4 75 07 8B 46 06 B4 4C  CD 21 5F 5E 5D CB 8B 0E   .u..F..L .!_^]...
```

```
B2A0:  9C 0A E3 07 BB 02 00 FF  1E 9A 0A 1E C5 16 8C 06   ........ ........
B2B0:  B8 00 25 CD 21 1F 80 3E  CE 06 00 74 0D 1E A0 CF   ..%.!..> ...t....
B2C0:  06 C5 16 D0 06 B4 25 CD  21 1F C3 3B F7 73 0E 83   ......%. !..;.s..
B2D0:  EF 04 8B 05 0B 45 02 74  F2 FF 1D EB EE C3 55 8B   .....E.t ......U.
B2E0:  EC B8 FC 00 50 0E E8 DE  02 83 3E D6 06 00 74 04   ....P... ..>...t.
B2F0:  FF 1E D4 06 B8 FF 00 50  0E E8 CB 02 8B E5 5D CB   .......P ......].
B300:  B8 02 00 E9 2B FE 59 5A  8B DC 2B D8 72 0B 3B 1E   ....+.YZ ..+.r.;.
B310:  DC 06 72 05 8B E3 52 51  CB 52 51 A1 D8 06 40 75   ..r...RQ .RQ...@u
B320:  05 33 C0 E9 0B FE FF 2E  D8 06 56 33 F6 B9 42 00   .3...... ..V3..B.
B330:  32 E4 FC AC 32 E0 E2 FB  80 F4 55 74 0F 0E E8 9D   2...2..  ..Ut....
B340:  FF B8 01 00 50 0E E8 7E  02 B8 01 00 5E CB 8F 06   ....P..~ ....^...
B350:  DE 06 8F 06 E0 06 B4 30  CD 21 A3 A2 06 BA 01 00   .......0 .!......
B360:  3C 02 74 29 8E 06 A0 06  26 8E 06 2C 00 8C 06 C9   <.t).... &..,....
B370:  06 33 C0 99 B9 00 80 33  FF F2 AE AE 75 FB 47 47   .3.....3 ....u.GG
B380:  89 3E C7 06 B9 FF FF F2  AE F7 D1 8B D1 BF 01 00   .>...... ........
B390:  BE 81 00 8E 1E A0 06 AC  3C 20 74 FB 3C 09 74 F7   ........ < t.<.t.
B3A0:  3C 0D 74 6F 0A C0 74 6B  47 4E AC 3C 20 74 E8 3C   <.to..tk GN.< t.<
B3B0:  09 74 E4 3C 0D 74 5C 0A  C0 74 58 3C 22 74 24 3C   .t.<.t\. .tX<"t$<
B3C0:  5C 74 03 42 EB E4 33 C9  41 AC 3C 5C 74 FA 3C 22   \t.B..3. A.<\t.<"
B3D0:  74 04 03 D1 EB D3 8B C1  D1 E9 13 D1 A8 01 75 CA   t....... ......u.
B3E0:  EB 01 4E AC 3C 0D 74 2B  0A C0 74 27 3C 22 74 BA   ..N.<.t+ ..t'<"t.
B3F0:  3C 5C 74 03 42 EB EC 33  C9 41 AC 3C 5C 74 FA 3C   <\t.B..3 .A.<\t.<
B400:  22 74 04 03 D1 EB DB 8B  C1 D1 E9 13 D1 A8 01 75   "t...... .......u
B410:  D2 EB 97 16 1F 89 3E BD  06 03 D7 47 D1 E7 D1 E7   ......>. ...G....
B420:  03 D7 42 80 E2 FE 2B E2  8B C4 A3 BF 06 8C 16 C1   ..B...+. ........
B430:  06 8B D8 03 FB 16 07 36  89 3F 36 8C 57 02 83 C3   .......6 .?6.W...
B440:  04 C5 36 C7 06 AC AA 0A  C0 75 FA 36 8E 1E A0 06   ..6..... .u.6....
B450:  BE 81 00 EB 03 33 C0 AA  AC 3C 20 74 FB 3C 09 74   .....3.. .< t.<.t
B460:  F7 3C 0D 75 03 E9 84 00  0A C0 75 03 EB 7E 90 36   .<.u.... ..u..~.6
B470:  89 3F 36 8C 57 02 83 C3  04 4E AC 3C 20 74 D6 3C   .?6.W... .N.< t.<
B480:  09 74 D2 3C 0D 74 62 0A  C0 74 5E 3C 22 74 27 3C   .t.<.tb. .t^<"t'<
B490:  5C 74 03 AA EB E4 33 C9  41 AC 3C 5C 74 FA 3C 22   \t....3. A.<\t.<"
B4A0:  74 06 B0 5C F3 AA EB D1  B0 5C D1 E9 F3 AA 73 06   t..\.... .\....s.
B4B0:  B0 22 AA EB C5 4E AC 3C  0D 74 2E 0A C0 74 2A 3C   ."...N.< .t...t*<
B4C0:  22 74 B7 3C 5C 74 03 AA  EB EC 33 C9 41 AC 3C 5C   "t.<\t.. ..3.A.<\
B4D0:  74 FA 3C 22 74 06 B0 5C  F3 AA EB D9 B0 5C D1 E9   t.<"t..\ .....\..
B4E0:  F3 AA 73 96 B0 22 AA EB  CD 33 C0 AA 16 1F C7 07   ..s..".. .3......
B4F0:  00 00 C7 47 02 00 00 FF  2E DE 06 00 55 8B EC 83   ...G.... ....U...
B500:  EC 04 1E 8E 06 A0 06 26  8B 1E 2C 00 8E C3 8C 46   .......& ..,....F
B510:  FE 33 C0 33 F6 33 FF B9  FF FF 0B DB 74 0E 26 80   .3.3.3.. ....t.&.
B520:  3E 00 00 00 74 06 F2 AE  46 AE 75 FA 8B C7 40 24   >...t... F.u...@$
B530:  FE 46 8B FE D1 E6 D1 E6  B9 09 00 E8 C0 00 52 50   .F...... ......RP
B540:  8B C6 E8 B9 00 A3 C3 06  89 16 C5 06 89 56 FC 06   ........ .....V..
B550:  1F 8B CF 8B D8 33 F6 5F  07 49 E3 33 8B 04 36 3B   .....3._ .I.3..6;
B560:  06 7E 06 75 14 51 56 57  06 16 07 BF 7E 06 B9 06   .~.u.QVW ....~...
B570:  00 F3 A7 07 5F 5E 59 74  0B 8E 5E FC 89 3F 8C 47   ...._^Yt ..^..?.G
B580:  02 83 C3 04 8E 5E FE AC  AA 0A C0 75 FA E2 CD 8E   .....^.. ...u....
B590:  5E FC 89 0F 89 4F 02 1F  8B E5 5D CB 55 8B EC 56   ^....O.. ..].U..V
B5A0:  57 1E 07 8B 56 06 BE 2E  0B AD 3B C2 74 10 40 96   W...V... ..;.t.@.
B5B0:  74 0C 97 33 C0 B9 FF FF  F2 AE 8B F7 EB EB 96 5F   t..3.... ......._
B5C0:  5E 8B E5 5D CA 02 00 55  8B EC 57 FF 76 06 0E E8   ^..]...U ..W.v...
B5D0:  CA FF 0B C0 74 20 92 8B  FA 33 C0 B9 FF FF F2 AE   ....t .. .3......
B5E0:  F7 D1 49 BB 02 00 81 3E  8A 0A D6 D6 75 04 FF 16   ..I....> ....u...
B5F0:  8C 0A B4 40 CD 21 5F 8B  E5 5D CA 02 00 00 53 06   ...@.!_. .]....S.
```

```
B600:  51 B9 00 04 87 0E 66 09  51 50 9A CA 22 E5 0A 5B   Q.....f. QP.."..[
B610:  8F 06 66 09 59 8B DA 0B  D8 74 03 07 5B C3 8B C1   ..f.Y... .t..[...
B620:  E9 0E FB 00 72 15 33 C0  8B E5 5D CB 73 F8 50 E8   ....r.3. ..].s.P.
B630:  1A 00 58 32 E4 8B E5 5D  CB 73 07 E8 0E 00 B8 FF   ..X2...] .s......
B640:  FF 99 8B E5 5D CB 32 E4  E8 01 00 CB A2 A5 06 0A   ....].2. ........
B650:  E4 75 22 80 3E A2 06 03  72 0C 3C 22 73 0C 3C 20   .u".>... r.<"s.<
B660:  72 04 B0 05 EB 06 3C 13  76 02 B0 13 BB E2 06 D7   r.....<. v.......
B670:  98 A3 9A 06 C3 8A C4 EB  F7 00 55 8B EC 83 EC 10   ........ ..U.....
B680:  57 56 BF FF FF 8B 76 06  F6 44 0A 40 74 03 E9 A3   WV....v. .D.@t...
B690:  00 F6 44 0A 83 75 03 E9  9A 00 1E 56 9A CC 0E E5   ..D..u.. ...V....
B6A0:  0A 83 C4 04 8B F8 8B DE  81 EB FC 06 8B 87 F0 07   ........ ........
B6B0:  89 46 FA 1E 56 E8 12 06  83 C4 04 8A 44 0B 2A E4   .F..V... ....D.*.
B6C0:  50 9A F2 1D E5 0A 83 C4  02 0B C0 7C 64 83 7E FA   P....... ...|d.~.
B6D0:  00 74 61 B8 F6 06 1E 50  8D 46 F0 16 50 9A D6 25   .ta....P .F..P..%
B6E0:  E5 0A 83 C4 08 8D 46 F2  89 46 FC 8C 56 FE 80 7E   ......F. .F..V..~
B6F0:  F0 5C 74 14 B8 F8 06 1E  50 8D 46 F0 16 50 9A 90   .\t..... P.F..P..
B700:  25 E5 0A 83 C4 08 EB 03  FF 4E FC B8 0A 00 50 FF   %....... .N....P.
B710:  76 FE FF 76 FC FF 76 FA  9A 4E 26 E5 0A 83 C4 08   v..v..v. .N&.....
B720:  8D 46 F0 16 50 9A 0E 2A  E5 0A 83 C4 04 0B C0 74   .F..P..* .......t
B730:  03 BF FF FF C6 44 0A 00  8B C7 5E 5F 8B E5 5D CB   .....D.. ..^_..].
B740:  55 8B EC 83 EC 08 9A DE  1C E5 0A 89 56 FE 0B D0   U....... ....V...
B750:  75 06 2B C0 99 EB 19 90  FF 76 FE 50 FF 76 0E FF   u.+..... .v.P.v..
B760:  76 0C FF 76 0A FF 76 08  FF 76 06 9A 0A 0D E5 0A   v..v..v. .v......
B770:  8B E5 5D CB 55 8B EC 2B  C0 50 FF 76 0C FF 76 0A   ..].U..+ .P.v..v.
B780:  FF 76 08 FF 76 06 9A FC  06 E5 0A 8B E5 5D CB 90   .v..v... .....]..
B790:  55 8B EC 83 EC 06 57 56  8B 76 06 1E 56 E8 A6 06   U.....WV .v..V...
B7A0:  83 C4 04 8B F8 8D 46 0E  16 50 FF 76 0C FF 76 0A   ......F. .P.v..v.
B7B0:  1E 56 9A F4 17 E5 0A 83  C4 0C 89 46 FA 1E 56 57   .V...... ...F..VW
B7C0:  E8 04 07 83 C4 06 8B 46  FA 5E 5F 8B E5 5D CB 90   .......F .^_..]..
B7D0:  55 8B EC 83 EC 04 56 57  8B 46 0A F7 66 0C 8B C8   U.....VW .F..f...
B7E0:  0B CA 74 61 89 46 FC 89  56 FE C4 5E 06 8B 76 0E   ..ta.F.. V..^..v.
B7F0:  0B D2 75 1F 3D FF FF 74  1A 8B CB 03 C8 72 14 50   ..u.=..t .....r.P
B800:  53 52 8B C8 E8 6A 00 8B  C8 5A 5B 58 2B C1 83 DA   SR...j.. .Z[X+...
B810:  00 EB 3C 83 FB 01 77 05  B9 00 80 EB 04 8B CB F7   ..<...w. ........
B820:  D9 51 50 53 52 E8 49 00  8B C8 5A 5B 58 5F 2B C1   .QPSR.I. ..Z[X_+.
B830:  83 DA 00 3B CF 72 18 03  D9 73 0C 8C C1 81 C1 00   ...;.r.. .s......
B840:  10 8E C1 EB 02 EB 24 8B  C8 0B CA 75 A3 EB 00 8B   ......$. ...u....
B850:  C8 0B CA 74 13 8B 4E FC  2B C8 8B C1 8B 4E FE 1B   ...t..N. +....N..
B860:  CA 8B D1 F7 76 0A EB 03  8B 46 0C 5F 5E 8B E5 5D   ....v... .F._^..]
B870:  CB 55 8B EC 83 EC 04 89  4E FE BF EC 07 8B C6 2D   .U...... N......-
B880:  FC 06 03 F8 F6 44 0A 0C  75 05 F6 05 01 74 05 8B   .....D.. u....t..
B890:  45 02 EB 03 B8 00 02 89  46 FC F6 44 0A 0C 75 05   E....... F..D..u.
B8A0:  F6 05 01 74 33 8B 44 04  0B C0 74 2C 3B C1 76 02   ...t3.D. ..t,;.v.
B8B0:  8B C1 50 53 51 06 50 FF  74 02 FF 34 06 53 0E E8   ..PSQ.P. t..4.S..
B8C0:  62 20 83 C4 0A 07 59 5B  58 2B C8 29 44 04 03 D8   b ....Y[ X+.)D...
B8D0:  01 04 EB 00 E3 62 EB C2  3B 4E FC 72 30 33 D2 8B   .....b.. ;N.r03..
B8E0:  C1 F7 76 FC 8B C1 2B C2  53 51 06 50 06 53 33 C0   ..v...+. SQ.P.S3.
B8F0:  8A 44 0B 50 0E E8 A4 17  83 C4 08 07 59 5B 0B C0   .D.P.... ....Y[..
B900:  74 2C 3D FF FF 74 2D 2B  C8 03 D8 EB C7 53 51 06   t,=..t-+ .....SQ.
B910:  1E 56 0E E8 2C 02 83 C4  04 07 59 5B 3D FF FF 74   .V..,... ..Y[=..t
B920:  17 26 88 07 43 49 8B 45  02 89 46 FC EB A6 80 4C   .&..CI.E ..F....L
B930:  0A 10 EB 04 80 4C 0A 20  8B 46 FE 2B C1 8B E5 5D   .....L.  .F.+...]
B940:  C3 00 55 8B EC 83 EC 04  56 57 8B 46 0A F7 66 0C   ..U..... VW.F..f.
B950:  8B C8 0B CA 74 61 89 46  FC 89 56 FE C4 5E 06 8B   ....ta.F ..V..^..
```

```
B960:  76 0E 0B D2 75 1F 3D FF  FF 74 1A 8B CB 03 C8 72   v...u.=. .t.....r
B970:  14 50 53 52 8B C8 E8 6A  00 8B C8 5A 5B 58 2B C1   .PSR...j ...Z[X+.
B980:  83 DA 00 EB 3C 83 FB 01  77 05 B9 00 80 EB 04 8B   ....<... w.......
B990:  CB F7 D9 51 50 53 52 E8  49 00 8B C8 5A 5B 58 5F   ...QPSR. I...Z[X_
B9A0:  2B C1 83 DA 00 3B CF 72  18 03 D9 73 0C 8C C1 81   +....;.r ...s....
B9B0:  C1 00 10 8E C1 EB 02 EB  24 8B C8 0B CA 75 A3 EB   ........ $....u..
B9C0:  00 8B C8 0B CA 74 13 8B  4E FC 2B C8 8B C1 8B 4E   .....t.. N.+....N
B9D0:  FE 1B CA 8B D1 F7 76 0A  EB 03 8B 46 0C 5F 5E 8B   ......v. ...F._^.
B9E0:  E5 5D CB 55 8B EC 83 EC  04 89 4E FE BF EC 07 8B   .].U.... ..N.....
B9F0:  C6 2D FC 06 03 F8 F6 44  0A 0C 75 05 F6 05 01 74   .-.....D ..u....t
BA00:  05 8B 45 02 EB 03 B8 00  02 89 46 FC F6 44 0A 08   ..E..... ..F..D..
BA10:  75 05 F6 05 01 74 36 8B  44 04 0B C0 74 2F 3B C1   u....t6. D...t/;.
BA20:  76 02 8B C1 50 53 51 06  50 06 53 FF 74 02 FF 34   v...PSQ. P.S.t..4
BA30:  0E E8 F0 1E 83 C4 0A 07  59 5B 58 2B C8 29 44 04   ........ Y[X+.)D.
BA40:  03 D8 01 04 EB 00 0B C9  75 C2 E9 83 00 3B 4E FC   ........ u....;N.
BA50:  72 50 F6 44 0A 08 75 05  F6 05 01 74 13 53 51 06   rP.D..u. ...t.SQ.
BA60:  1E 56 0E E8 AA 04 83 C4  04 07 59 5B 0B C0 75 60   .V...... ..Y[..u`
BA70:  33 D2 8B C1 F7 76 FC 8B  C1 2B C2 50 53 51 06 50   3....v.. .+.PSQ.P
BA80:  06 53 33 C0 8A 44 0B 50  0E E8 0E 17 83 C4 08 07   .S3..D.P ........
BA90:  59 5B 5A 3D FF FF 74 34  2B C8 3B C2 75 2E 03 D8   Y[Z=..t4 +.;.u...
BAA0:  EB A4 33 C0 26 8A 07 53  51 06 1E 56 50 0E E8 2D   ..3.&..S Q..VP..-
BAB0:  01 83 C4 06 07 59 5B 3D  FF FF 74 14 43 49 8B 45   .....Y[= ..t.CI.E
BAC0:  02 0B C0 75 01 40 89 46  FC E9 7A FF 80 4C 0A 20   ...u.@.F ..z..L.
BAD0:  8B 46 FE 2B C1 8B E5 5D  C3 00 55 8B EC 83 EC 06   .F.+...] ..U.....
BAE0:  57 B8 08 07 1E 50 E8 5D  03 83 C4 04 8B F8 8D 46   W....P.] .......F
BAF0:  0A 16 50 FF 76 08 FF 76  06 B8 08 07 1E 50 9A F4   ..P.v..v .....P..
BB00:  17 E5 0A 83 C4 0C 89 46  FA B8 08 07 1E 50 57 E8   .......F .....PW.
BB10:  B5 03 83 C4 06 8B 46 FA  5F 8B E5 5D CB 90 55 8B   ......F. _..]..U.
BB20:  EC 83 EC 04 56 8D 46 0A  16 50 FF 76 08 FF 76 06   ....V.F. .P.v..v.
BB30:  BE FC 06 1E 56 9A A0 0F  E5 0A 83 C4 0C 5E 8B E5   ....V... .....^..
BB40:  5D CB 55 8B EC 56 57 8B  76 06 8A 44 0A A8 83 74   ].U..VW. v..D...t
BB50:  5F A8 40 75 5B A8 02 75  48 0C 01 88 44 0A 8B FE   _.@u[..u H...D...
BB60:  81 EF FC 06 81 C7 EC 07  A8 0C 75 0D F6 05 01 75   ........ ..u....u
BB70:  08 1E 56 E8 8C 01 83 C4  04 8B 44 06 89 04 FF 75   ..V..... ..D....u
BB80:  02 FF 74 08 50 33 DB 8A  5C 0B 53 0E E8 0D 15 83   ..t.P3.. \.S.....
BB90:  C4 08 0B C0 74 11 3D FF  FF 75 1A 80 4C 0A 20 EB   ....t.=. .u..L. .
BBA0:  0A 80 4C 0A 20 EB 09 80  4C 0A 10 C7 44 04 00 00   ..L. ... L...D...
BBB0:  B8 FF FF EB 25 8A BF A9  06 80 E7 82 80 FF 82 75   ....%... .......u
BBC0:  0B 8A 7C 0A F6 C7 82 75  03 80 0D 20 48 89 44 04   ..|....u ... H.D.
BBD0:  C4 1C 33 C0 26 8A 07 43  89 1C 5F 5E 5D CB 55 8B   ..3.&..C .._^].U.
BBE0:  EC 56 57 8B 76 08 8A 44  0A A8 82 74 6A A8 40 75   .VW.v..D ...tj.@u
BBF0:  66 C7 44 04 00 00 A8 01  74 0B A8 10 74 59 8B 4C   f.D..... t...tY.L
BC00:  06 89 0C 24 FE 0C 02 24  EF 88 44 0A 8B FE 81 EF   ...$...$ ..D.....
BC10:  FC 06 81 C7 EC 07 33 DB  8A 5C 0B A8 08 75 51 A8   ......3. .\...uQ.
BC20:  04 75 1E F6 05 01 75 48  81 FE 08 07 74 0C 81 FE   .u....uH ....t...
BC30:  14 07 74 06 81 FE 2C 07  75 26 F6 87 A9 06 40 74   ..t...,. u&....@t
BC40:  1F B9 01 00 51 16 8D 7E  06 57 53 0E E8 4B 15 83   ....Q..~ .WS..K..
BC50:  C4 08 B9 01 00 EB 46 B8  FF FF 80 4C 0A 20 EB 65   ......F. ...L. .e
BC60:  53 1E 56 E8 9C 00 83 C4  04 5B F6 44 0A 08 74 D1   S.V..... .[.D..t.
BC70:  8B 0C 8B 54 06 2B CA 42  89 14 8B 55 02 4A 89 54   ...T.+.B ...U.J.T
BC80:  04 E3 25 51 51 FF 74 08  FF 74 06 53 0E E8 0A 15   ..%QQ.t. .t.S....
BC90:  83 C4 08 59 C4 7C 06 8B  56 06 26 88 15 3B C1 75   ...Y.|.. V.&..;.u
BCA0:  B6 33 C0 8A 46 06 EB 1D  33 C0 F6 87 A9 06 20 74   .3..F... 3..... t
BCB0:  E3 B9 02 00 51 50 50 53  0E E8 9A 11 83 C4 08 33   ....QPPS .......3
```

```
BCC0:  C0 8B C8 EB CF 5F 5E 5D  CB 00 55 8B EC 56 8B 76   ....._^] ..U..V.v
BCD0:  04 8A 44 0A A8 83 74 26  A8 08 74 22 FF 74 08 FF   ..D...t& ..t".t..
BCE0:  74 06 9A D0 22 E5 0A 83  C4 04 80 64 0A F7 33 C0   t..."... ...d..3.
BCF0:  89 44 06 89 44 08 89 04  89 44 02 89 44 04 5E 5D   .D..D... .D..D.^]
BD00:  C3 00 55 8B EC 56 8B 76  04 B8 00 02 50 9A CA 22   ..U..V.v ....P.."
BD10:  E5 0A 59 8B DE 81 EB FC  06 81 C3 EC 07 0B D2 74   ..Y..... .......t
BD20:  0B 80 4C 0A 08 C7 47 02  00 02 EB 0E 80 4C 0A 04   ..L...G. .....L..
BD30:  C7 47 02 01 00 8C DA 8D  47 01 89 54 02 89 04 89   .G...... G..T....
BD40:  54 08 89 44 06 C7 44 04  00 00 5E 5D C3 00 55 8B   T..D..D. ..^]..U.
BD50:  EC 83 EC 08 57 56 C4 5E  0A 26 8A 07 98 3D 77 00   ....WV.^ .&...=w.
BD60:  74 48 77 08 2C 61 74 4C  2C 11 74 06 2B C0 99 E9   tHw.,atL ,.t.+...
BD70:  CD 00 2B F6 C6 46 FC 01  C7 46 FE 01 00 FF 46 0A   ..+..F.. .F....F.
BD80:  C4 5E 0A 26 80 3F 00 74  5B 83 7E FE 00 74 55 26   .^.&.?.t [.~..tU&
BD90:  8A 07 98 3D 74 00 74 34  77 08 2C 2B 74 1C 2C 37   ...=t.t4 w.,+t.,7
BDA0:  74 36 C7 46 FE 00 00 EB  D4 90 BE 01 03 C6 46 FC   t6.F.... ......F.
BDB0:  02 EB C5 90 BE 09 01 EB  F4 90 F7 C6 02 00 75 E2   ........ ......u.
BDC0:  83 CE 02 83 E6 FE C6 46  FC 80 EB B1 F7 C6 00 C0   .......F ........
BDD0:  75 D0 81 CE 00 40 EB A5  F7 C6 00 C0 75 C4 81 CE   u....@.. ....u...
BDE0:  00 80 EB 99 B8 A4 01 50  FF 76 0E 56 FF 76 08 FF   .......P .v.V.v..
BDF0:  76 06 9A 8C 1E E5 0A 83  C4 0A 89 46 FA 0B C0 7D   v....... ...F...}
BE00:  03 E9 68 FF FF 06 FA 06  8B 7E 10 8B C7 2D FC 06   ..h..... .~...-..
BE10:  05 EC 07 89 46 F8 8A 46  FC 88 45 0A 8B 5E F8 C6   ....F..F ..E..^..
BE20:  07 00 2B C0 89 45 04 89  47 04 89 45 02 89 05 89   ..+..E.. G..E....
BE30:  45 08 89 45 06 8A 46 FA  88 45 0B 8B C7 8C DA 5E   E..E..F. .E.....^
BE40:  5F 8B E5 5D CB 90 55 8B  EC 56 57 8B 76 04 BB E0   _..]..U. .VW.v...
BE50:  08 81 FE 08 07 74 12 BB  E4 08 81 FE 14 07 74 09   .....t.. ......t.
BE60:  BB E8 08 81 FE 2C 07 75  58 8B FE 81 EF FC 06 81   .....,.u X.......
BE70:  C7 EC 07 F6 44 0A 0C 75  48 F6 05 01 75 43 8B 07   ....D..u H...uC..
BE80:  8B 57 02 8B C8 0B CA 74  21 89 44 06 89 54 08 89   .W.....t !.D..T..
BE90:  04 89 54 02 C7 44 04 00  02 C7 45 02 00 02 80 4C   ..T..D.. ..E....L
BEA0:  0A 02 C6 05 11 B8 01 00  EB 19 53 B8 00 02 50 9A   ........ ..S...P.
BEB0:  CA 22 E5 0A 5B 5B 0B D2  74 07 89 07 89 57 02 EB   ."..[[.. t....W..
BEC0:  C8 33 C0 5F 5E 5D C3 55  8B EC 56 57 8B 76 06 8B   .3._^].U ..VW.v..
BED0:  FE 81 EF FC 06 81 C7 EC  07 F6 05 10 74 2D 33 DB   ........ ....t-3.
BEE0:  8A 5C 0B F6 87 A9 06 40  74 21 1E 56 0E E8 20 00   .\.....@ t!.V.. .
BEF0:  83 C4 04 83 7E 04 00 74  12 33 C0 88 05 89 45 02   ....~..t .3....E.
BF00:  89 04 89 44 02 89 44 06  89 44 08 5F 5E 5D C3 00   ...D..D. .D._^]..
BF10:  55 8B EC 83 EC 02 57 56  2B FF 8B 46 08 0B 46 06   U.....WV +..F..F.
BF20:  75 08 2B C0 50 E8 70 00  EB 5F 8B 76 06 8A 44 0A   u.+.P.p. ._.v..D.
BF30:  8B C8 24 03 3C 02 75 3F  F6 C1 08 75 0D 8B DE 81   ..$.<.u? ...u....
BF40:  EB FC 06 F6 87 EC 07 01  74 2D 8B 04 2B 44 06 89   ........ t-..+D..
BF50:  46 FE 0B C0 7E 21 50 FF  74 08 FF 74 06 8A 4C 0B   F...~!P. t..t..L.
BF60:  2A ED 51 9A 56 21 E5 0A  83 C4 08 39 46 FE 74 07   *.Q.V!.. ...9F.t.
BF70:  80 4C 0A 20 BF FF FF 8B  44 06 8B 54 08 89 04 89   .L. .... D..T....
BF80:  54 02 C7 44 04 00 00 8B  C7 5E 5F 8B E5 5D CB 90   T..D.... .^_..]..
BF90:  B8 01 00 50 E8 01 00 CB  55 8B EC 83 EC 02 57 56   ...P.... U.....WV
BFA0:  BE FC 06 2B FF 89 7E FE  EB 08 C7 46 FE FF FF 83   ...+..~. ...F....
BFB0:  C6 0C 39 36 DC 08 72 16  F6 44 0A 83 74 F1 1E 56   ..96..r. .D..t..V
BFC0:  9A CC 0E E5 0A 83 C4 04  40 74 DF 47 EB E1 83 7E   ........ @t.G...~
BFD0:  04 01 75 04 8B C7 EB 03  8B 46 FE 5E 5F 8B E5 5D   ..u..... .F.^_..]
BFE0:  C2 02 00 90 55 8B EC B8  B4 01 9A C2 02 E5 0A 57   ....U... .......W
BFF0:  56 C6 46 B8 00 2B C0 89  46 E8 89 46 C6 C4 5E 0A   V.F..+.. F..F..^.
C000:  26 80 3F 00 75 03 E9 6F  07 26 8A 1F 2A FF F6 87   &.?.u..o .&..*...
C010:  87 09 08 74 2D FF 4E E8  8D 46 E8 16 50 FF 76 08   ...t-.N. .F..P.v.
```

```
C020:  FF 76 06 E8 DE 07 50 FF  76 08 FF 76 06 E8 B6 07   .v....P. v..v....
C030:  FF 46 0A C4 5E 0A 26 8A  1F 2A FF F6 87 87 09 08   .F..^.&. .*......
C040:  75 EE 8B 5E 0A 26 80 3F  25 74 03 E9 02 07 C6 46   u..^.&.? %t.....F
C050:  C0 00 2A C0 88 46 FC 88  46 B6 88 46 F2 88 46 F6   ..*..F.. F..F..F.
C060:  88 46 EE 88 86 52 FE 2B  C0 89 46 EA 89 46 BA 89   .F...R.+ ..F..F..
C070:  46 FE 89 46 C4 89 46 C2  EB 68 90 90 FF 46 0A C4   F..F..F. .h...F..
C080:  5E 0A 26 8A 07 2A E4 8B  F8 F6 85 87 09 04 74 1A   ^.&..*.. ......t.
C090:  FF 46 BA 8B 46 FE 8B C8  D1 E0 D1 E0 03 C1 D1 E0   .F..F... ........
C0A0:  03 C7 2D 30 00 89 46 FE  EB 38 3D 6C 00 74 1C 77   ..-0..F. .8=l.t.w
C0B0:  2D 3C 4C 74 13 7F 1F 2C  2A 74 15 2C 1C 74 23 EB   -<Lt..., *t.,.t#.
C0C0:  1D 90 FE 46 FC EB 1B 90  FE 46 F6 FE 46 F6 EB 12   ...F.... .F..F...
C0D0:  FE 46 EE EB 0D 90 2C 4E  74 08 2C 1A 74 E4 FE 86   .F....,N t.,.t...
C0E0:  52 FE 80 BE 52 FE 00 74  93 80 7E EE 00 75 14 C4   R...R..t ..~..u..
C0F0:  5E 0E 83 46 0E 04 26 8B  07 26 8B 57 02 89 46 F8   ^..F..&. .&.W..F.
C100:  89 56 FA C6 86 52 FE 00  C4 5E 0A 26 8A 07 0C 20   .V...R.. .^.&...
C110:  2A E4 8B F8 83 FF 6E 74  29 83 FF 63 74 16 83 FF   *.....nt )..ct...
C120:  7B 74 11 8D 46 E8 16 50  FF 76 08 FF 76 06 E8 D3   {t..F..P .v..v...
C130:  06 EB 0D 90 FF 46 E8 FF  76 08 FF 76 06 E8 74 06   .....F.. v..v..t.
C140:  8B F0 83 7E BA 00 74 09  83 7E FE 00 75 03 E9 93   ...~..t. .~..u...
C150:  05 8B C7 E9 B0 05 83 7E  BA 00 75 06 FF 46 BA FF   .......~ ..u..F..
C160:  46 FE C7 46 BC F2 08 8C  5E BE EB 23 C7 46 BC EC   F..F.... ^..#.F..
C170:  08 EB F4 90 FF 46 0A C4  5E 0A 89 5E BC 8C 46 BE   .....F.. ^..^..F.
C180:  26 80 3F 5E 75 0C 8D 47  01 89 46 BC 8C 46 BE FE   &.?^u..G ..F..F..
C190:  4E B6 B8 20 00 50 2B C0  50 8D 46 C8 16 50 9A 3E   N.. .P+. P.F..P.>
C1A0:  29 E5 0A 83 C4 08 83 FF  7B 74 03 E9 B3 00 C4 5E   )....... {t.....^
C1B0:  BC 26 80 3F 5D 74 03 E9  A7 00 C6 46 C0 5D FF 46   .&.?]t.. ...F.].F
C1C0:  BC C6 46 D3 20 E9 99 00  26 8A 07 88 46 F4 FF 46   ..F. ... &...F..F
C1D0:  BC 3C 2D 75 0F 80 7E C0  00 74 09 8B 5E BC 26 80   .<-u..~. .t..^.&.
C1E0:  3F 5D 75 24 8A 5E F4 88  5E C0 B0 01 8A CB 80 E1   ?]u$.^.. ^.......
C1F0:  07 8B D1 8A CA D2 E0 B1  03 D2 EB 2A FF 8D 4E C8   ........ ...*..N.
C200:  03 D9 36 08 07 EB 5A 90  FF 46 BC 26 8A 07 88 46   ..6...Z. .F.&...F
C210:  F4 3A 46 C0 76 06 88 46  F0 EB 0D 90 8A 46 C0 88   .:F.v..F .....F..
C220:  46 F0 8A 46 F4 88 46 C0  8A 46 C0 88 46 F4 EB 21   F..F..F. .F..F..!
C230:  8A 5E F4 B0 01 8A CB 80  E1 07 8B D1 8A CA D2 E0   .^...... ........
C240:  B1 03 D2 EB 2A FF 8D 4E  C8 03 D9 36 08 07 FE 46   ....*..N ...6...F
C250:  F4 8A 46 F0 98 8A 4E F4  2A ED 3B C1 7D D2 88 6E   ..F...N. *.;.}..n
C260:  C0 C4 5E BC 26 80 3F 5D  74 03 E9 5B FF 26 80 3F   ..^.&.?] t..[.&.?
C270:  00 75 03 E9 02 05 83 FF  7B 75 0A 8B C3 8C C2 89   .u...... {u......
C280:  46 0A 89 56 0C 8B 46 F8  8B 56 FA 89 86 54 FE 89   F..V..F. .V...T..
C290:  96 56 FE 83 7E BA 00 74  0A 8B 46 FE FF 4E FE 0B   .V..~..t ..F..N..
C2A0:  C0 74 4F 83 FE FF 74 4A  8B DE B1 03 D3 FB 8D 46   .tO...tJ .......F
C2B0:  C8 03 D8 36 8A 07 32 46  B6 98 BA 01 00 8B CE 8B   ...6..2F ........
C2C0:  D9 80 E1 07 D3 E2 85 C2  74 28 80 7E EE 00 75 0E   ........ t(.~..u.
C2D0:  8B C6 C4 5E F8 FF 46 F8  26 88 07 EB 05 90 FF 86   ...^..F. &.......
C2E0:  54 FE FF 46 E8 FF 76 08  FF 76 06 E8 C6 04 8B F0   T..F..v. .v......
C2F0:  EB A1 FF 4E E8 56 FF 76  08 FF 76 06 E8 E7 04 8B   ...N.V.v ..v.....
C300:  46 F8 8B 56 FA 39 86 54  FE 75 09 39 96 56 FE 75   F..V.9.T .u.9.V.u
C310:  03 E9 64 04 80 7E EE 00  74 03 E9 2B 04 FF 46 C6   ..d..~.. t..+..F.
C320:  83 FF 63 75 03 E9 20 04  8E C2 8B D8 26 C6 07 00   ..cu.. . ....&...
C330:  E9 15 04 90 BF 64 00 83  FE 2D 75 06 FE 46 F2 EB   .....d.. .-u..F..
C340:  06 90 83 FE 2B 75 1F FF  4E FE 75 0C 83 7E BA 00   ....+u.. N.u..~..
C350:  74 06 FE 86 52 FE EB 0E  FF 46 E8 FF 76 08 FF 76   t...R... .F..v..v
C360:  06 E8 50 04 8B F0 83 FE  30 74 03 E9 57 01 FF 46   ..P..... 0t..W..F
C370:  E8 FF 76 08 FF 76 06 E8  3A 04 8B F0 3C 78 74 04   ..v..v.. :...<xt.
```

```
C380:  3C 58 75 14 FF 46 E8 FF  76 08 FF 76 06 E8 24 04   <Xu..F.. v..v..$.
C390:  8B F0 BF 78 00 E9 2D 01  FF 46 EA 83 FF 78 74 06   ...x..-. .F...xt.
C3A0:  BF 6F 00 E9 1F 01 FF 4E  E8 56 FF 76 08 FF 76 06   .o.....N .V.v..v.
C3B0:  E8 33 04 BE 30 00 E9 0C  01 90 80 7E FC 00 75 06   .3..0... ...~..u.
C3C0:  FE 46 F6 BF 46 00 83 FE  2D 75 05 FE 46 F2 EB 08   .F..F... -u..F...
C3D0:  83 FE 2B 74 03 E9 ED 00  FF 4E FE 74 03 E9 95 00   ..+t.... .N.t....
C3E0:  83 7E BA 00 75 03 E9 8C  00 FE 86 52 FE E9 D5 00   .~..u... ...R....
C3F0:  83 FF 78 74 0D 83 FF 70  74 08 83 FF 46 74 03 E9   ..xt...p t...Ft..
C400:  84 00 F6 84 87 09 80 74  15 B0 04 50 8D 46 C2 16   .......t ...P.F..
C410:  50 9A 40 2A E5 0A 56 E8  7C 03 8B F0 EB 35 83 FF   P.@*..V. |....5..
C420:  46 75 2C 83 7E EA 00 74  26 83 FE 3A 75 1C 8B 46   Fu,.~..t &..:u..F
C430:  C2 89 46 EC 2B C0 89 46  C4 89 46 C2 C7 46 EA FF   ..F.+..F ..F..F..
C440:  FF BF 70 00 BE 30 00 EB  0A 90 C7 46 EA 00 00 FE   ..p..0.. ...F....
C450:  86 52 FE 80 BE 52 FE 00  75 5E FF 46 EA 8D 44 D0   .R...R.. u^.F..D.
C460:  99 01 46 C2 11 56 C4 83  7E BA 00 74 08 FF 4E FE   ..F..V.. ~..t..N.
C470:  75 03 E9 74 FF FF 46 E8  FF 76 08 FF 76 06 E8 33   u..t..F. .v..v..3
C480:  03 8B F0 EB 40 90 F6 84  87 09 04 74 C2 83 FF 6F   ....@... ...t...o
C490:  75 14 83 FE 38 7D B8 B0  03 50 8D 46 C2 16 50 9A   u...8}.. .P.F..P.
C4A0:  40 2A E5 0A EB AD B8 0A  00 99 52 50 8D 46 C2 16   @*...... ..RP.F..
C4B0:  50 9A 1E 2A E5 0A EB 9B  FF 4E E8 56 FF 76 08 FF   P..*.... .N.V.v..
C4C0:  76 06 E8 21 03 80 BE 52  FE 00 75 03 E9 21 FF 83   v..!...R ..u..!..
C4D0:  FF 70 75 0F 80 7E F6 00  74 09 8B 46 EC 8B 4E C2   .pu..~.. t..F..N.
C4E0:  89 46 C4 80 7E F2 00 74  0A F7 5E C2 83 56 C4 00   .F..~..t ..^..V..
C4F0:  F7 5E C4 83 FF 46 75 05  C7 46 EA 00 00 83 7E EA   .^...Fu. .F....~.
C500:  00 75 03 E9 72 02 80 7E  EE 00 74 03 E9 39 02 FF   .u..r..~ ..t..9..
C510:  46 C6 80 7E F6 00 74 14  8B 46 C2 8B 56 C4 C4 5E   F..~..t. .F..V..^
C520:  F8 26 89 07 26 89 57 02  E9 1D 02 90 8B 46 C2 C4   .&..&.W. .....F..
C530:  5E F8 26 89 07 E9 10 02  8B 46 E8 99 89 46 C2 89   ^.&..... .F...F..
C540:  56 C4 EB CE 8D 86 58 FE  89 46 BC 8C 56 BE 83 FE   V.....X. .F..V...
C550:  2D 75 13 8B D8 36 C6 07  2D 8D 86 59 FE 89 46 BC   -u...6.. -..Y..F.
C560:  8C 56 BE EB 06 90 83 FE  2B 75 11 FF 4E FE FF 46   .V...... +u..N..F
C570:  E8 FF 76 08 FF 76 06 E8  3A 02 8B F0 83 7E BA 00   ..v..v.. :....~..
C580:  74 07 81 7E FE 5D 01 7E  2D C7 46 FE 5D 01 EB 26   t..~.].~ -.F.]..&
C590:  8B 46 FE FF 4E FE 0B C0  74 23 FF 46 EA 8B C6 C4   .F..N... t#.F....
C5A0:  5E BC FF 46 BC 26 88 07  FF 46 E8 FF 76 08 FF 76   ^..F.&.. .F..v..v
C5B0:  06 E8 00 02 8B F0 F6 84  87 09 04 75 D3 83 FE 2E   ........ ...u....
C5C0:  75 43 8B 46 FE FF 4E FE  0B C0 74 39 C4 5E BC FF   uC.F..N. ..t9.^..
C5D0:  46 BC 26 C6 07 2E EB 18  8B 46 FE FF 4E FE 0B C0   F.&..... .F..N...
C5E0:  74 23 FF 46 EA 8B C6 C4  5E BC FF 46 BC 26 88 07   t#.F.... ^..F.&..
C5F0:  FF 46 E8 FF 76 08 FF 76  06 E8 B8 01 8B F0 F6 84   .F..v..v ........
C600:  87 09 04 75 D3 83 7E EA  00 75 03 E9 81 00 8B C6   ...u..~. .u......
C610:  3C 65 74 04 3C 45 75 77  8B 46 FE FF 4E FE 0B C0   <et.<Euw .F..N...
C620:  74 6D C4 5E BC FF 46 BC  26 C6 07 65 FF 46 E8 FF   tm.^..F. &..e.F..
C630:  76 08 FF 76 06 E8 7C 01  8B F0 83 FE 2D 75 0F C4   v..v..|. ....-u..
C640:  5E BC FF 46 BC 26 C6 07  2D EB 08 90 90 90 83 FE   ^..F.&.. -.......
C650:  2B 75 35 8B 46 FE FF 4E  FE 0B C0 75 1D FF 46 FE   +u5.F..N ...u..F.
C660:  EB 26 8B 46 FE FF 4E FE  0B C0 74 23 FF 46 EA 8B   .&.F..N. ..t#.F..
C670:  C6 C4 5E BC FF 46 BC 26  88 07 FF 46 E8 FF 76 08   ..^..F.& ...F..v.
C680:  FF 76 06 E8 2E 01 8B F0  F6 84 87 09 04 75 D3 FF   .v...... .....u..
C690:  4E E8 56 FF 76 08 FF 76  06 E8 4A 01 83 7E EA 00   N.V.v..v ..J..~..
C6A0:  75 03 E9 D3 00 80 7E EE  00 74 03 E9 9A 00 FF 46   u.....~. .t.....F
C6B0:  C6 C4 5E BC 26 C6 07 00  8D 86 58 FE 16 50 FF 76   ..^.&... ..X..P.v
C6C0:  FA FF 76 F8 8A 46 F6 98  50 8E 06 24 0B 26 FF 1E   ..v..F.. P..$.&..
C6D0:  70 09 83 C4 0A EB 71 90  C4 5E 0A 26 8A 07 2A E4   p.....q. .^.&..*.
```

```
C6E0:  3B C6 74 12 FF 4E E8 56  FF 76 08 FF 76 06 E8 F5   ;.t..N.V .v..v...
C6F0:  00 E9 84 00 90 90 FE 4E  B8 80 7E EE 00 75 49 83   .......N .....uI.
C700:  6E 0E 04 EB 43 90 2D 63  00 3D 18 00 77 CA D1 E0   n...C.-c .=..w...
C710:  93 2E FF A7 D2 16 12 11  82 13 00 15 00 15 00 15   ........ ........
C720:  94 16 F0 12 94 16 94 16  94 16 94 16 F4 14 82 13   ........ ........
C730:  76 13 94 16 94 16 28 11  94 16 82 13 94 16 94 16   v.....(. ........
C740:  F3 12 94 16 94 16 30 11  FE 46 B8 FF 46 0A EB 20   ......0. .F..F..
C750:  FF 46 E8 FF 76 08 FF 76  06 E8 58 00 8B F0 C4 5E   .F..v..v ..X....^
C760:  0A FF 46 0A 26 8A 07 2A  E4 3B F0 74 03 E9 74 FF   ..F.&..* .;.t..t.
C770:  83 FE FF 74 03 E9 85 F8  83 FE FF 75 0C 83 7E C6   ...t.... ...u....
C780:  00 75 06 80 7E B8 00 74  05 8B 46 C6 EB 02 8B C6   .u....t ..F.....
C790:  5E 5F 8B E5 5D CB 55 8B  EC 8B 5E 04 F6 87 87 09   ^_..].U. ..^.....
C7A0:  04 74 05 8B C3 EB 08 90  8B C3 24 DF 2D 07 00 5D   .t...... ..$.-..]
C7B0:  C2 02 00 90 55 8B EC 83  EC 04 C4 5E 04 26 FF 4F   ....U... ...^.&.O
C7C0:  04 78 15 26 8B 07 26 8B  57 02 26 FF 07 8B D8 8E   .x.&..&. W.&.....
C7D0:  C2 26 8A 07 2A E4 EB 07  06 53 9A FE 0A E5 0A 8B   .&..*... .S......
C7E0:  E5 5D C2 04 00 90 55 8B  EC 83 7E 08 FF 74 0E FF   .]....U. .....t..
C7F0:  76 06 FF 76 04 FF 76 08  9A 86 1D E5 0A 8B E5 5D   v..v..v. .......]
C800:  C2 06 00 90 55 8B EC 56  C4 5E 08 26 FF 07 FF 76   ....U..V .^.&...v
C810:  06 FF 76 04 E8 9D FF 8B  F0 F6 84 87 09 08 75 E8   ..v..... ......u.
C820:  5E 8B E5 5D C2 08 00 90  4C 18 57 18 6D 18 A1 18   ^..].... L.W.m...
C830:  CD 18 D5 18 FE 18 30 19  55 8B EC B8 71 01 0E E8   ......0. U...q...
C840:  C4 EA 56 57 33 C0 89 46  F8 88 46 FB C4 76 0A 26   ..VW3..F ..F..v.&
C850:  AC 89 76 0A 88 46 FE 0A  C0 74 06 83 7E F8 00 7D   ..v..F.. .t.....}
C860:  06 8B 46 F8 E9 B5 04 BB  F4 08 2C 20 3C 58 77 05   ..F..... .., <Xw.
C870:  D7 24 0F EB 02 B0 00 B1  03 D2 E0 02 46 FB D7 FE   .$...... ....F...
C880:  C1 D2 E8 88 46 FB 98 8B  D8 D1 E3 2E FF A7 E4 17   ....F... ........
C890:  8A 56 FE B9 01 00 E8 36  04 EB B1 33 C0 89 46 F0   .V.....6 ...3..F.
C8A0:  89 46 F6 89 46 EE C7 46  FC 20 00 48 89 46 F4 EB   .F..F..F . .H.F..
C8B0:  9B 8A 46 FE 3C 2D 75 06  80 4E FC 04 EB 8E 3C 2B   ..F.<-u. .N....<+
C8C0:  75 06 80 4E FC 01 EB 84  3C 20 75 07 80 4E FC 02   u..N.... < u..N..
C8D0:  E9 79 FF 3C 23 75 07 80  4E FC 80 E9 6E FF 80 4E   .y.<#u.. N...n..N
C8E0:  FC 08 E9 67 FF 8A 4E FE  80 F9 2A 75 0F E8 5C 03   ...g..N. ..*u..\.
C8F0:  0B C0 79 17 F7 D8 80 4E  FC 04 EB 0F 80 E9 30 32   ..y....N ......02
C900:  ED 8B 46 F6 BB 0A 00 F7  E3 03 C1 89 46 F6 E9 3B   ..F..... ....F..;
C910:  FF C7 46 F4 00 00 E9 33  FF 8A 4E FE 80 F9 2A 75   ..F....3 ..N...*u
C920:  0C E8 28 03 0B C0 79 14  B8 FF FF EB 0F 80 E9 30   ..(...y. .......0
C930:  32 ED 8B 46 F4 BB 0A 00  F7 E3 03 C1 89 46 F4 E9   2..F.... .....F..
C940:  0A FF 8A 46 FE 3C 6C 75  06 80 4E FC 10 EB 22 3C   ...F.<lu ..N..."<
C950:  46 75 06 80 4E FC 20 EB  18 3C 4E 75 06 80 4E FD   Fu..N. . .<Nu..N.
C960:  10 EB 0E 3C 4C 75 06 80  4E FD 04 EB 04 80 4E FD   ...<Lu.. N.....N.
C970:  08 E9 D8 FE 8A 46 FE 3C  64 75 03 E9 94 01 3C 69   .....F.< du....<i
C980:  75 03 E9 8D 01 3C 75 75  03 E9 8A 01 3C 58 75 03   u....<uu ....<Xu.
C990:  E9 89 01 3C 78 75 03 E9  88 01 3C 6F 75 03 E9 A2   ...<xu.. ..<ou...
C9A0:  01 3C 63 74 1A 3C 73 74  27 3C 6E 74 51 3C 70 74   .<ct.<st '<ntQ<pt
C9B0:  60 3C 45 74 07 3C 47 74  03 E9 BB 00 E9 B5 00 E8   `<Et.<Gt ........
C9C0:  8A 02 8D BE 8F FE 16 07  AA 4F B9 01 00 E9 F1 01   ........ .O......
C9D0:  E8 90 02 0B FF 75 12 8C  C0 0B C0 75 0C 1E 07 BF   .....u.. ...u....
C9E0:  4D 09 8B 0E 53 09 E9 D8  01 57 8B 4E F4 E3 07 32   M...S... .W.N...2
C9F0:  C0 F2 AE 75 01 4F 59 2B  F9 87 CF E9 C3 01 E8 62   ...u.OY+ .......b
CA00:  02 8B 46 F8 AB F6 46 FC  10 74 03 33 C0 AB E9 3B   ..F...F. .t.3...;
CA10:  FE F6 46 FC 30 75 05 E8  32 02 EB 39 E8 36 02 F6   ..F.0u.. 2..9.6..
CA20:  46 FD 18 75 30 C6 46 FF  07 B9 10 00 16 07 52 33   F..u0.F. ......R3
CA30:  D2 8D BE 97 FE BE 04 00  E8 B0 02 B9 10 00 8D BE   ........ ........
```

```
CA40:  92 FE 58 33 D2 BE 04 00  E8 A0 02 C6 86 93 FE 3A   ..X3.... .......:
CA50:  B9 09 00 EB 18 C6 46 FF  07 B9 10 00 16 07 33 D2   ......F. ......3.
CA60:  8D BE 92 FE BE 04 00 E8  81 02 B9 04 00 8D BE 8F   ........ ........
CA70:  FE E9 4D 01 FF 46 EE 80  4E FC 40 8A 46 FE 0C 20   ..M..F.. N.@.F..
CA80:  98 8B F0 83 7E F4 00 7F  13 74 07 C7 46 F4 06 00   ....~... .t..F...
CA90:  EB 0A 3D 67 00 75 05 C7  46 F4 01 00 8D BE 8F FE   ..=g.u.. F.......
CAA0:  FF 76 EE FF 76 F4 56 16  57 FF 76 10 FF 76 0E F6   .v..v.V. W.v..v..
CAB0:  46 FD 04 74 0A FF 1E 7C  09 83 46 0E 0A EB 08 FF   F..t...| ..F.....
CAC0:  1E 68 09 83 46 0E 08 83  C4 0E F6 46 FC 80 74 0F   .h..F... ...F..t.
CAD0:  83 7E F4 00 75 09 16 57  FF 1E 74 09 83 C4 04 83   .~..u..W ..t.....
CAE0:  FE 67 75 10 F7 46 FC 80  00 75 09 16 57 FF 1E 6C   .gu..F.. .u..W..l
CAF0:  09 83 C4 04 16 07 26 80  3D 2D 75 05 47 80 4E FD   ......&. =-u.G.N.
CB00:  01 B9 FF FF 57 B0 00 F2  AE 4F 59 2B F9 87 CF E9   ....W... .OY+....
CB10:  AF 00 80 4E FC 40 C6 46  FA 0A EB 35 C6 46 FF 07   ...N.@.F ...5.F..
CB20:  EB 04 C6 46 FF 27 F6 46  FC 80 74 11 C7 46 F0 02   ...F.'.F ..t..F..
CB30:  00 C6 46 F2 30 B2 51 02  56 FF 88 56 F3 C6 46 FA   ..F.0.Q. V..V..F.
CB40:  10 EB 0E F6 46 FC 80 74  04 80 4E FD 02 C6 46 FA   ....F..t ..N...F.
CB50:  08 F6 46 FC 10 74 05 E8  FB 00 EB 0E E8 ED 00 F6   ..F..t.. ........
CB60:  46 FC 40 74 03 99 EB 02  33 D2 F6 46 FC 40 74 0F   F.@t.... 3..F.@t.
CB70:  0B D2 7D 0B 80 4E FD 01  F7 D8 83 D2 00 F7 DA 83   ..}..N.. ........
CB80:  7E F4 00 7D 07 C7 46 F4  01 00 EB 04 80 66 FC F7   ~..}..F. .....f..
CB90:  8B D8 0B DA 75 05 C7 46  F0 00 00 8D 7E EB 16 07   ....u..F ....~...
CBA0:  8A 4E FA 32 ED 8B 76 F4  E8 40 01 F6 46 FD 02 74   .N.2..v. .@..F..t
CBB0:  0E E3 06 26 80 3D 30 74  06 4F 26 C6 05 30 41 EB   ...&.=0t .O&..0A.
CBC0:  00 F6 46 FC 40 74 31 F6  46 FD 01 74 0B C6 46 F2   ..F.@t1. F..t..F.
CBD0:  2D C7 46 F0 01 00 EB 20  F6 46 FC 01 74 0B C6 46   -.F....  .F..t..F
CBE0:  F2 2B C7 46 F0 01 00 EB  0F F6 46 FC 02 74 09 C6   .+.F.... ..F..t..
CBF0:  46 F2 20 C7 46 F0 01 00  8B 46 F6 2B C1 2B 46 F0   F. .F... .F.+.+F.
CC00:  7D 02 33 C0 06 57 51 F6  46 FC 0C 75 07 8B C8 B2   }.3..WQ. F..u....
CC10:  20 E8 BB 00 50 16 07 8D  7E F2 8B 4E F0 E8 91 00    ...P... ~..N....
CC20:  58 F6 46 FC 08 74 0D F6  46 FC 04 75 07 8B C8 B2   X.F..t.. F..u....
CC30:  30 E8 9B 00 59 5F 07 50  E8 76 00 58 F6 46 FC 04   0...Y_.P .v.X.F..
CC40:  74 07 8B C8 B2 20 E8 86  00 E9 00 FC C4 76 0E 26   t.... .. .....v.&
CC50:  AD 89 76 0E C3 C4 76 0E  26 AD 8B D0 26 AD 92 89   ..v...v. &...&...
CC60:  76 0E C3 F6 46 FC 20 74  08 E8 E9 FF 8E C2 8B F8   v...F. t ........
CC70:  C3 E8 D8 FF 8B F8 0B C0  75 03 8E C0 C3 1E 07 C3   ........ u.......
CC80:  98 06 57 C4 5E 06 26 FF  4F 04 78 10 26 8B 3F 26   ..W.^.&. O.x.&.?&
CC90:  FF 07 26 8E 47 02 AA 33  C0 5F 07 C3 51 52 06 53   ..&.G..3 ._..QR.S
CCA0:  50 0E E8 39 EF 83 C4 06  5A 59 3D FF FF 75 E8 EB   P..9.... ZY=..u..
CCB0:  E8 E3 1B 8B F7 01 4E F8  57 33 FF 26 AC E8 C0 FF   ......N. W3.&....
CCC0:  0B F8 E2 F7 0B FF 5F 74  05 C7 46 F8 FF FF C3 E3   ......_t ..F.....
CCD0:  19 01 4E F8 57 33 FF 8A  C2 E8 A4 FF 0B F8 E2 F7   ..N.W3.. ........
CCE0:  0B FF 5F 74 05 C7 46 F8  FF FF C3 FD 57 93 0B F6   .._t..F. ....W...
CCF0:  7F 0A 0B DB 75 06 0B D2  75 02 EB 1A 92 33 D2 F7   ....u... u....3..
CD00:  F1 93 F7 F1 92 87 D3 04  30 3C 39 76 03 02 46 FF   ........ 0<9v..F.
CD10:  AA 8B C2 4E EB D8 59 2B  CF 47 FC C3 5F 5E 8B E5   ...N..Y+ .G.._^..
CD20:  5D CB 55 8B EC 83 EC 04  56 BE FC 06 2B C0 89 46   ].U..... V...+..F
CD30:  FE 89 46 FC EB 03 83 C6  0C 39 36 DC 08 72 26 F6   ..F..... .96..r&.
CD40:  44 0A 83 75 F1 C7 44 04  00 00 C6 44 0A 00 2B C0   D..u..D. ...D..+.
CD50:  89 44 08 89 44 06 89 44  02 89 04 C6 44 0B FF 89   .D..D..D ....D...
CD60:  76 FC 8C 5E FE 8B 46 FC  8B 56 FE 5E 8B E5 5D CB   v..^..F. .V.^..].
CD70:  55 8B EC BB 08 07 EB 06  55 8B EC 8B 5E 08 FF 4F   U....... U...^..O
CD80:  04 78 0F FF 07 C4 1F 8A  46 06 26 88 47 FF 32 E4   .x...... F.&.G.2.
CD90:  EB 0C 1E 53 FF 76 06 0E  E8 43 EE 83 C4 06 5D CB   ...S.v.. .C....].
```

```
CDA0:  55 8B EC BB FC 06 EB 06  55 8B EC 8B 5E 06 FF 4F   U....... U...^..O
CDB0:  04 78 0C FF 07 C4 1F 26  8A 47 FF 32 E4 EB 08 1E   .x.....& .G.2....
CDC0:  53 0E E8 7D ED 5B 5B 5D  CB 00 55 8B EC 57 56 8B   S..}.[[] ..U..WV.
CDD0:  76 06 8B 7E 08 83 FE FF  74 12 F6 45 0A 01 75 12   v..~.... t..E..u.
CDE0:  F6 45 0A 80 74 06 F6 45  0A 02 74 06 B8 FF FF EB   .E..t..E ..t.....
CDF0:  3E 90 8B 45 08 0B 45 06  75 08 1E 57 E8 03 EF 83   >..E..E. u..W....
CE00:  C4 04 8B 05 8B 55 02 39  45 06 75 0D 39 55 08 75   .....U.9 E.u.9U.u
CE10:  08 83 7D 04 00 75 D5 FF  05 FF 45 04 8B C6 FF 0D   ..}..u.. ..E.....
CE20:  C4 1D 26 88 07 80 65 0A  EF 80 4D 0A 01 2A E4 5E   ..&...e. ..M..*.^
CE30:  5F 8B E5 5D CB 90 55 8B  EC 8B 5E 06 3B 1E A7 06   _..]..U. ..^.;...
CE40:  72 06 B8 00 09 F9 EB 0B  B4 3E CD 21 72 05 C6 87   r....... .>.!r...
CE50:  A9 06 00 E9 CE E7 55 8B  EC 83 EC 04 8B 5E 06 3B   ......U. .....^.;
CE60:  1E A7 06 72 05 B8 00 09  EB 2A F7 46 0A 00 80 74   ...r.... .*.F...t
CE70:  48 83 7E 0C 00 74 1A 33  C9 8B D1 B8 01 42 CD 21   H.~..t.3 .....B.!
CE80:  72 4B F7 46 0C 02 00 75  0E 03 46 08 13 56 0A 79   rK.F...u ..F..V.y
CE90:  28 B8 00 16 F9 EB 36 89  56 FE 89 46 FC 8B D1 B8   (.....6. V..F....
CEA0:  02 42 CD 21 03 46 08 13  56 0A 79 0D 8B 4E FE 8B   .B.!.F.. V.y..N..
CEB0:  56 FC B8 00 42 CD 21 EB  D8 8B 56 08 8B 4E 0A 8A   V...B.!. ..V..N..
CEC0:  46 0C B4 42 CD 21 72 05  80 A7 A9 06 FD E9 69 E7   F..B.!r. ......i.
CED0:  55 8B EC 83 EC 04 32 FF  80 3E A2 06 03 72 03 8A   U.....2. .>...r..
CEE0:  7E 0C 8B 46 0E 89 46 0C  EB 08 55 8B EC 83 EC 04   ~..F..F. ..U.....
CEF0:  32 FF 88 7E FE 8B 46 0A  8B C8 C6 46 FC 00 A9 00   2..~..F. ...F....
CF00:  80 75 10 A9 00 40 75 07  F6 06 57 09 80 75 04 C6   .u...@u. ..W..u..
CF10:  46 FC 80 1E C5 56 06 24  03 0A C7 B4 3D CD 21 1F   F....V.$ ....=.!.
CF20:  73 12 3D 02 00 75 09 F7  C1 00 01 74 03 E9 A5 00   s.=..u.. ...t....
CF30:  F9 E9 05 E7 93 8B C1 25  00 05 3D 00 05 75 09 B4   .......% ..=..u..
CF40:  3E CD 21 B8 00 11 EB E8  C6 46 FD 01 B8 00 44 CD   >.!..... .F....D.
CF50:  21 F6 C2 80 74 04 80 4E  FC 40 F6 46 FC 40 74 03   !...t..N .@.F.@t.
CF60:  E9 DF 00 8B 46 0A A9 00  02 74 1E A9 03 00 74 09   ....F... .t....t.
CF70:  33 C9 B4 40 CD 21 E9 C9  00 B4 3E CD 21 1E C5 56   3..@.!.. ..>.!..V
CF80:  06 B8 00 43 CD 21 1F EB  69 F6 46 FC 80 75 03 E9   ...C.!.. i.F..u..
CF90:  B0 00 A9 02 00 75 03 E9  A8 00 B9 FF FF 8B D1 B8   .....u.. ........
CFA0:  02 42 CD 21 F7 D9 1E 16  1F 8D 56 FF B4 3F CD 21   .B.!.... ..V..?.!
CFB0:  1F 0B C0 74 15 80 7E FF  1A 75 0F F7 D9 8B D1 B8   ...t..~. .u......
CFC0:  02 42 CD 21 33 C9 B4 40  CD 21 33 C9 8B D1 B8 00   .B.!3..@ .!3.....
CFD0:  42 CD 21 EB 6D C6 46 FD  00 8B 4E 0C E8 AC 00 89   B.!.m.F. ..N.....
CFE0:  4E 0C F6 46 FE FF 75 07  F7 46 0A 02 00 75 03 80   N..F..u. .F...u..
CFF0:  E1 FE 1E C5 56 06 B4 3C  CD 21 1F 73 03 E9 39 E6   ....V..< .!.s..9.
D000:  93 F6 46 FE FF 75 07 F7  46 0A 02 00 75 34 B4 3E   ..F..u.. F...u4.>
D010:  CD 21 8A 46 0A 24 03 0A  46 FE 1E C5 56 06 B4 3D   .!.F.$.. F...V..=
D020:  CD 21 1F 72 D8 93 F6 46  FD 01 75 16 F7 46 0C 01   .!.r...F ..u..F..
D030:  00 74 0F 80 C9 01 1E C5  56 06 B8 01 43 CD 21 1F   .t...... V...C.!.
D040:  72 BB F6 46 FC 40 75 3F  1E C5 56 06 B8 00 43 CD   r..F.@u? ..V...C.
D050:  21 1F 8B C1 32 C9 25 01  00 74 02 B1 10 F7 46 0A   !...2.%. .t....F.
D060:  08 00 74 03 80 C9 20 3B  1E A7 06 72 0A B4 3E CD   ..t... ; ...r..>.
D070:  21 B8 00 18 E9 B9 FE 0A  4E FC 80 C9 01 88 8F A9   !....... N.......
D080:  06 8B C3 8B E5 5D CB 32  C9 EB DC A1 9C 06 F7 D0   .....].2 ........
D090:  23 C1 33 C9 A8 80 75 03  80 C9 01 C3 55 8B EC 83   #.3...u. ....U...
D0A0:  EC 02 8B 5E 06 3B 1E A7  06 72 06 F9 B8 00 09 EB   ...^.;.. .r......
D0B0:  73 33 C0 8B 4E 0C E3 6C  F6 87 A9 06 02 75 65 81   s3..N..l .....ue.
D0C0:  3E 8A 0A D6 D6 75 04 FF  16 8C 0A 8B 4E 0C 1E C5   >....u.. ....N...
D0D0:  56 08 B4 3F CD 21 1F 73  04 B4 09 EB 47 F6 87 A9   V..?.!.s ....G...
D0E0:  06 80 74 40 80 A7 A9 06  FB 56 57 1E 07 8E 5E 0A   ..t@.... .VW...^.
D0F0:  FC 8B F2 8B FA 8B C8 E3  27 B4 0D 80 3C 0A 75 06   ........ '...<.u.
```

```
D100:  26 80 8F A9 06 04 AC 3A  C4 74 1C 3C 1A 75 08 26   &......: .t.<.u.&
D110:  80 8F A9 06 02 EB 05 88  05 47 E2 EA 8B C7 2B C2   ........ .G....+.
D120:  06 1F 5F 5E E9 12 E5 83  F9 01 74 07 80 3C 0A 74   .._^.... ..t..<.t
D130:  E9 EB E4 06 1F F6 87 A9  06 40 74 1C B8 00 44 CD   ........ .@t...D.
D140:  21 F7 C2 20 00 75 0D 1E  16 1F 8D 56 FF B4 3F CD   !.. .u.. ...V..?.
D150:  21 1F 72 CE B0 0A EB 30  1E 16 1F C6 46 FF 00 8D   !.r....0 ....F...
D160:  56 FF B4 3F CD 21 1F 72  B9 0B C0 74 19 83 7E 0C   V..?.!.r ...t..~.
D170:  01 74 1F B9 FF FF 8B D1  B8 01 42 CD 21 B9 01 00   .t...... ..B.!...
D180:  80 7E FF 0A 74 07 B0 0D  C5 56 08 EB 8A C5 56 08   .~..t... .V....V.
D190:  EB 88 80 7E FF 0A 75 DB  EB BA 55 8B EC 83 EC 08   ...~..u. ..U.....
D1A0:  8B 5E 06 3B 1E A7 06 72  07 B8 00 09 F9 E9 89 E4   .^.;...r ........
D1B0:  81 3E 8A 0A D6 D6 75 04  FF 16 8C 0A F6 87 A9 06   .>....u. ........
D1C0:  20 74 0B B8 02 42 33 C9  8B D1 CD 21 72 DF F6 87    t...B3. ...!r...
D1D0:  A9 06 80 74 7C 8C 5E FA  8E 46 0A C5 56 08 33 C0   ...t|.^. .F..V.3.
D1E0:  89 46 FE 89 46 FC FC 57  56 8B FA 8B F2 89 66 F8   .F..F..W V.....f.
D1F0:  8B 4E 0C E3 3F B0 0A F2  AE 75 51 1E 8E 5E FA 9A   .N..?... .uQ..^..
D200:  B6 22 E5 0A 3D A8 00 76  4A 1F 83 EC 02 8B DC BA   ."..=..v J.......
D210:  00 02 3D 28 02 73 03 BA  80 00 2B E2 8B D4 8B FA   ..=(.s.. ..+.....
D220:  16 07 8B 4E 0C AC 3C 0A  74 0C 3B FB 74 19 AA E2   ...N..<. t.;.t...
D230:  F4 E8 26 00 EB 79 B0 0D  3B FB 75 03 E8 1B 00 AA   ..&..y.. ;.u.....
D240:  B0 0A FF 46 FC EB E3 E8  10 00 EB E2 5E 5F 8E 5E   ...F.... ....^_.^
D250:  FA EB 6D B8 FC FF 0E E8  AC E0 50 53 51 1E 06 1F   ..m..... ..PSQ...
D260:  8B CF 2B CA E3 12 51 8B  5E 06 B4 40 CD 21 59 72   ..+...Q. ^..@.!Yr
D270:  0E 01 46 FE 3B C8 77 07  1F 59 5B 58 8B FA C3 9F   ..F.;.w. .Y[X....
D280:  1F 83 C4 08 83 7E FE 00  75 25 9E 73 04 B4 09 EB   .....~.. u%.s....
D290:  24 8E 5E FA F6 87 A9 06  40 74 0E 8E 5E 0A 8B 5E   $.^..... @t..^..^
D2A0:  08 80 3F 1A 75 03 F8 EB  0C F9 B8 00 1C EB 06 8B   ..?.u... ........
D2B0:  46 FE 2B 46 FC 8B 66 F8  5E 5F 8E 5E FA E9 79 E3   F.+F..f. ^_.^..y.
D2C0:  8B 4E 0C 0B C9 75 05 8B  C1 E9 6D E3 1E C5 56 08   .N...u.. ..m...V.
D2D0:  B4 40 CD 21 1E 07 1F 73  04 B4 09 EB E0 0B C0 75   .@.!...s .......u
D2E0:  DC F6 87 A9 06 40 74 0B  8B DA 26 80 3F 1A 75 03   .....@t. ..&.?.u.
D2F0:  F8 EB CA F9 B8 00 1C EB  C4 00 59 5A A1 DC 06 3B   ........ ..YZ...;
D300:  C4 73 07 2B C4 F7 D8 52  51 CB 33 C0 EB F9 EA E9   .s.+...R Q.3.....
D310:  22 E5 0A 00 EA D6 22 E5  0A 00 55 8B EC 56 C4 76   ".....". ..U..V.v
D320:  06 8C C1 E3 05 26 80 4C  FE 01 5E 5D CB 55 8B EC   .....&.L ..^].U..
D330:  56 57 8B 4E 06 83 F9 E8  77 69 1E A1 5A 09 0B C0   VW.N.... wi..Z...
D340:  74 48 BF D0 23 8B 36 62  09 C5 1E 5C 09 1E 56 57   tH..#.6b ...\..VW
D350:  FF D7 5F 5E 73 2B 8C DA  C5 5F 0C 3B D6 75 EF 58   .._^s+.. ._.;.u.X
D360:  1F 1E C4 36 5C 09 26 8B  74 12 C5 1E 58 09 8C DA   ...6\.&. t...X...
D370:  3B D0 75 D9 1F 1E 81 FF  4C 24 74 0E BF 4C 24 EB   ;.u..... L$t..L$.
D380:  C4 5E 81 FF D0 23 74 0F  EB 0A 07 06 BF 58 09 E8   .^...#t. .....X..
D390:  FE 01 72 0E E8 7D 00 1F  89 16 5E 09 89 1E 5C 09   ..r..}.. ..^...\.
D3A0:  EB 04 1F 33 C0 99 5F 5E  5D CB 06 57 8B F8 03 FB   ...3.._^ ]..W....
D3B0:  89 7F 04 4F 4F 2D 16 00  8D 77 14 C7 05 FE FF 89   ...OO-.. .w......
D3C0:  7F 0A 48 89 04 8C 1F 8B  C6 8C DA 8E C2 8D 7F 06   ..H..... ........
D3D0:  FC AB AB 47 47 33 C0 AB  AB AB AB 5F 07 C3 26 8B   ...GG3.. ..._..&.
D3E0:  45 02 0B C0 75 09 26 8C  5D 02 26 89 1D EB 14 06   E...u.&. ].&.....
D3F0:  26 C4 75 08 26 8C 5C 0E  26 89 5C 0C 8C 47 12 89   &.u.&.\. &.\..G..
D400:  77 10 07 26 8C 5D 0A 26  89 5D 08 26 8C 5D 06 26   w..&.].& .].&.].&
D410:  89 5D 04 C3 41 80 E1 FE  53 FC 8B 77 08 8B 5F 0A   .]..A... S..w.._.
D420:  33 FF EB 23 8B C3 5B A8  01 75 42 53 8B 77 06 8B   3..#..[. .uBS.w..
D430:  5F 08 3B DE 74 36 4B 33  FF EB 0C 90 8D 54 FE 3B   _.;.t6K3 .....T.;
D440:  D3 73 E1 03 F0 72 23 AD  A8 01 74 F0 8B FE 48 3B   .s...r#. ..t...H;
D450:  C1 73 23 03 F0 72 13 8B  D0 AD A8 01 74 DE 03 C2   .s#..r.. ....t...
```

```
D460:  05 02 00 8B F7 89 44 FE  EB E4 8B C0 5B 8B 47 06   ......D. ....[.G.
D470:  89 47 08 F9 EB 19 5B 89  4C FE 74 09 03 F9 2B C1   .G....[. L.t...+.
D480:  48 89 05 2B F9 03 F9 89  7F 08 8B C6 8C DA F8 C3   H..+.... ........
D490:  51 57 F6 47 02 01 74 66  E8 D5 00 8B FE 8B 04 A8   QW.G..tf ........
D4A0:  01 74 03 2B C8 49 41 41  8B 77 04 0B F6 74 4F 03   .t.+.IAA .w...tO.
D4B0:  CE 73 09 33 C0 BA F0 FF  E3 33 EB 42 B8 FA 1D 8E   .s.3.... .3.B....
D4C0:  C0 26 A1 66 09 3D 00 20  74 16 BA 00 80 3B D0 72   .&.f.=.  t....;.r
D4D0:  06 D1 EA 75 F8 EB 22 83  FA 08 72 1D D1 E2 8B C2   ...u..". ..r.....
D4E0:  48 8B D0 03 C1 73 02 33  C0 F7 D2 23 C2 52 E8 2E   H....s.3 ...#.R..
D4F0:  00 5A 73 0D 83 FA F0 74  05 B8 10 00 EB E2 F9 EB   .Zs....t ........
D500:  1B 8B D0 2B 57 04 89 47  04 89 7F 08 8B 77 0A 4A   ...+W..G .....w.J
D510:  89 14 42 03 F2 C7 04 FE  FF 89 77 0A 5F 59 C3 8B   ..B..... ..w._Y..
D520:  D0 F6 47 02 04 74 0F 4A  8B 77 04 4E 3B D6 72 05   ..G..t.J .w.N;.r.
D530:  39 57 FE 73 36 42 53 51  8C DE 8E C6 B1 04 D3 E8   9W.s6BSQ ........
D540:  75 03 B8 00 10 F6 47 02  04 74 0A 03 C6 8B 1E A0   u.....G. .t......
D550:  06 2B C3 8E C3 8B D8 B4  4A CD 21 59 5B 72 10 8B   .+...... J.!Y[r..
D560:  C2 F6 47 02 04 74 04 4A  89 57 FE F8 EB 01 F9 C3   ..G..t.J .W......
D570:  57 8B 77 08 3B 77 0A 75  03 8B 77 06 AD 3D FE FF   W.w.;w.u ..w..=..
D580:  74 08 8B FE 24 FE 03 F0  EB F2 4F 4F 8B F7 5F C3   t...$... ..OO.._.
D590:  8B D1 83 C2 27 80 E2 F0  8B DA F7 DB F7 DB F5 D1   ....'... ........
D5A0:  DB D1 EB D1 EB D1 EB B4  48 CD 21 72 26 3B 06 7C   ........ H.!r&;.|
D5B0:  06 76 F4 3B 06 7A 06 76  03 A3 7A 06 8E D8 33 DB   .v.;.z.v ..z...3.
D5C0:  26 8B 45 0C 89 47 02 8B  C2 E8 DE FD E8 0F FE F8   &.E..G.. ........
D5D0:  EB 01 F9 C3 55 8B EC 8B  D7 8B DE 1E C4 7E 06 33   ....U... .....~.3
D5E0:  C0 B9 FF FF F2 AE 8D 75  FF C4 7E 0A B9 FF FF F2   .......u ..~.....
D5F0:  AE F7 D1 2B F9 8C C0 8E  D8 8E 46 08 87 FE 8B 46   ...+.... ..F....F
D600:  06 F7 C6 01 00 74 02 A4  49 D1 E9 F3 A5 13 C9 F3   .....t.. I.......
D610:  A4 8B F3 8B FA 1F 8C C2  5D CB 55 8B EC 8B D7 8B   ........ ].U.....
D620:  DE 1E C5 76 0A 8B FE 8C  D8 8E C0 33 C0 B9 FF FF   ...v.... ...3....
D630:  F2 AE F7 D1 C4 7E 06 8B  C7 A8 01 74 02 A4 49 D1   .....~.. ...t..I.
D640:  E9 F3 A5 13 C9 F3 A4 8B  F3 8B FA 1F 8C C2 5D CB   ........ ......].
D650:  55 8B EC 8B D7 8B DE 1E  C5 76 06 C4 7E 0A 33 C0   U....... .v..~.3.
D660:  B9 FF FF F2 AE F7 D1 2B  F9 F3 A6 74 05 1B C0 1D   .......+ ...t....
D670:  FF FF 1F 8B F3 8B FA 5D  CB 00 55 8B EC 8B D7 C4   .......] ..U.....
D680:  7E 06 33 C0 B9 FF FF F2  AE F7 D1 49 91 8B FA 5D   ~.3..... ...I...]
D690:  CB 00 55 8B EC 56 57 B3  01 8B 4E 0C 8B 46 06 33   ..U..VW. ..N..F.3
D6A0:  D2 83 F9 0A 75 01 99 1E  C5 7E 08 E9 29 03 55 8B   ....u... .~..).U.
D6B0:  EC 56 57 8B 56 0A 0B D2  7E 56 4A 8B 5E 0C C4 7E   .VW.V... ~VJ.^..~
D6C0:  06 0B D2 74 55 8B 4F 04  E3 1F 3B CA 76 02 8B CA   ...tU.O. ..;.v...
D6D0:  1E C5 37 B4 0A 51 AC AA  3A C4 E0 FA 58 1F 89 37   ..7..Q.. :...X..7
D6E0:  74 33 29 47 04 2B D0 EB  D8 06 53 52 1E 53 0E E8   t3)G.+.. ..SR.S..
D6F0:  50 E4 83 C4 04 5A 5B 07  3D FF FF 74 08 AA 3C 0A   P....Z[. =..t..<.
D700:  74 18 4A EB BC 3B 7E 06  74 06 F6 47 0A 20 74 0A   t.J..;~. t..G. t.
D710:  33 C0 99 EB 0E 2B C1 29  47 04 33 C0 AA 8B 46 06   3....+.) G.3...F.
D720:  8B 56 08 5F 5E 5D CB 00  55 8B EC 83 EC 02 57 56   .V._^].. U.....WV
D730:  FF 76 08 FF 76 06 9A 36  26 E5 0A 83 C4 04 8B F8   .v..v..6 &.......
D740:  FF 76 0C FF 76 0A E8 FD  E6 83 C4 04 8B F0 FF 76   .v..v... .......v
D750:  0C FF 76 0A 57 B8 01 00  50 FF 76 08 FF 76 06 9A   ..v.W... P.v..v..
D760:  FE 08 E5 0A 83 C4 0C 89  46 FE FF 76 0C FF 76 0A   ........ F..v..v.
D770:  56 E8 53 E7 83 C4 06 39  7E FE 75 04 2B C0 EB 03   V.S....9 ~.u.+...
D780:  B8 FF FF 5E 5F 8B E5 5D  CB 90 55 8B EC 83 EC 04   ...^_..] ..U.....
D790:  57 56 C6 06 56 0C 42 8B  46 06 8B 56 08 A3 52 0C   WV..V.B. F..V..R.
D7A0:  89 16 54 0C BE 4C 0C 89  04 89 54 02 C7 06 50 0C   ..T..L.. ..T...P.
D7B0:  FF 7F 8D 46 0E 16 50 FF  76 0C FF 76 0A 8B C6 1E   ...F..P. v..v....
```

```
D7C0:  50 9A F4 17 E5 0A 83 C4  0C 8B F8 FF 0E 50 0C 78   P....... .....P.x
D7D0:  0F C4 1E 4C 0C FF 06 4C  0C 26 C6 07 00 EB 0E 90   ...L...L .&......
D7E0:  1E 56 2B C0 50 9A 9A 0B  E5 0A 83 C4 06 8B C7 5E   .V+.P... .......^
D7F0:  5F 8B E5 5D CB 90 55 8B  EC 83 EC 04 56 C6 06 62   _..]..U. ....V..b
D800:  0C 49 8B 46 06 8B 56 08  A3 5E 0C 89 16 60 0C BE   .I.F..V. .^...`..
D810:  58 0C 89 04 89 54 02 52  50 9A 36 26 E5 0A 83 C4   X....T.R P.6&....
D820:  04 A3 5C 0C 8D 46 0E 16  50 FF 76 0C FF 76 0A B8   ..\..F.. P.v..v..
D830:  58 0C 1E 50 9A A0 0F E5  0A 83 C4 0C 5E 8B E5 5D   X..P.... ....^..]
D840:  CB 90 55 8B EC 8E 46 08  B4 49 CD 21 5D CB 55 8B   ..U...F. .I.!].U.
D850:  EC 56 57 8B 5E 0A 8B 46  06 F7 E3 8B C8 8B FA 8B   .VW.^..F ........
D860:  46 08 F7 E3 03 C7 8B D0  0B C1 74 1E 33 F6 8D 47   F....... ..t.3..G
D870:  FF 83 FA 0F 77 14 72 05  83 F9 F0 77 0D 83 FA 02   ....w.r. ...w....
D880:  77 04 72 08 E3 06 23 C3  74 18 EB 6D 83 FA 01 72   w.r...#. t..m...r
D890:  11 23 C3 74 0D 33 C0 F7  F3 8B F2 03 CA 72 5A BA   .#.t.3.. .....rZ.
D8A0:  01 00 8B D9 83 C3 0F 83  D2 00 B9 04 00 D1 EA D1   ........ ........
D8B0:  DB E2 FA B4 48 CD 21 72  40 3B 06 7C 06 76 F4 8B   ....H.!r @;.|.v..
D8C0:  D0 03 D3 4A 3B 16 7A 06  76 04 89 16 7A 06 8E C0   ...J;.z. v...z...
D8D0:  8B D0 FC B9 00 10 3B D9  73 02 8B CB D1 E1 D1 E1   ......;. s.......
D8E0:  D1 E1 33 FF 33 C0 F3 AB  96 B9 00 10 2B D9 76 0C   ..3.3... ....+.v.
D8F0:  96 8C C0 03 C1 8E C0 EB  DD 33 C0 99 5F 5E 5D CB   ........ .3.._^].
D900:  55 8B EC 8C D9 C5 5E 06  8B D3 EB 0B 2C 61 3C 1A   U.....^. ....,a<.
D910:  73 04 04 41 88 07 43 8A  07 0A C0 75 EF 92 8C DA   s..A..C. ...u....
D920:  8E D9 5D CB 55 8B EC 8B  4E 0E 1E 57 56 E3 48 C5   ..].U... N..WV.H.
D930:  76 0A C4 7E 06 8B C1 48  8B D7 F7 D2 2B C2 1B DB   v..~...H ....+...
D940:  23 C3 03 C2 8B D6 F7 D2  2B C2 1B DB 23 C3 03 C2   #....... +...#...
D950:  40 91 2B C1 D1 E9 F3 A5  13 C9 F3 A4 91 E3 18 0B   @.+..... ........
D960:  F6 75 07 8C D8 05 00 10  8E D8 0B FF 75 C7 8C C0   .u...... ....u...
D970:  05 00 10 8E C0 EB BE 8B  46 06 8B 56 08 5E 5F 1F   ........ F..V.^_.
D980:  5D CB 55 8B EC 8B 4E 0C  E3 38 57 C4 7E 06 8B D7   ].U...N. .8W.~...
D990:  F7 DA 74 0C 2B D1 1B DB  23 D3 03 D1 87 D1 2B D1   ..t.+... #.....+.
D9A0:  8B 46 0A 8A E0 D1 E9 F3  AB 13 C9 F3 AA 87 D1 E3   .F...... ........
D9B0:  10 8C C3 81 C3 00 10 8E  C3 D1 E9 F3 AB 13 C9 F3   ........ ........
D9C0:  AA 5F 8B 46 06 8B 56 08  5D CB 8B 4E 0E 8B 46 06   ._.F..V. ]..N..F.
D9D0:  8B 56 08 1E C5 7E 0A 57  1E 07 FC 93 0A C0 74 13   .V...~.W ......t.
D9E0:  83 F9 0A 75 0E 0B D2 79  0A B0 2D AA F7 DB 83 D2   ...u...y ..-.....
D9F0:  00 F7 DA 8B F7 92 33 D2  0B C0 74 02 F7 F1 93 F7   ......3. ..t.....
DA00:  F1 92 87 D3 04 30 3C 39  76 02 04 27 AA 8B C2 0B   .....0<9 v..'....
DA10:  C3 75 E2 88 05 4F AC 86  05 88 44 FF 8D 44 01 3B   .u...O.. ..D..D.;
DA20:  C7 72 F2 8C DA 58 1F 5F  5E 8B E5 5D CB 00 55 8B   .r...X._ ^..]..U.
DA30:  EC 8B 46 06 99 33 C2 2B  C2 5D CB 90 55 8B EC 8B   ..F..3.+ .]..U...
DA40:  46 06 8B 56 08 0B D2 7D  07 F7 D8 83 D2 00 F7 DA   F..V...} ........
DA50:  5D CB 55 8B EC 1E C5 56  06 B4 41 CD 21 1F E9 C3   ].U....V ..A.!...
DA60:  DB 00 55 8B EC 1E 53 C5  5E 06 FF 76 0C FF 76 0A   ..U...S. ^..v..v.
DA70:  FF 77 02 FF 37 0E E8 C5  00 89 07 89 57 02 5B 1F   .w..7... ....W.[.
DA80:  5D CA 08 00 55 8B EC 1E  53 C5 5E 06 8B 07 8B 57   ]...U... S.^....W
DA90:  02 8B 4E 0A 0E E8 D8 00  89 07 89 57 02 5B 1F 5D   ..N..... ...W.[.]
DAA0:  CA 06 00 00 55 8B EC 57  56 53 33 FF 8B 46 08 0B   ....U..W VS3..F..
DAB0:  C0 7D 11 47 8B 56 06 F7  D8 F7 DA 1D 00 00 89 46   .}.G.V.. .......F
DAC0:  08 89 56 06 8B 46 0C 0B  C0 7D 11 47 8B 56 0A F7   ..V..F.. .}.G.V..
DAD0:  D8 F7 DA 1D 00 00 89 46  0C 89 56 0A 0B C0 75 15   .......F ..V...u.
DAE0:  8B 4E 0A 8B 46 08 33 D2  F7 F1 8B D8 8B 46 06 F7   .N..F.3. .....F..
DAF0:  F1 8B D3 EB 38 8B D8 8B  4E 0A 8B 56 08 8B 46 06   ....8... N..V..F.
DB00:  D1 EB D1 D9 D1 EA D1 D8  0B DB 75 F4 F7 F1 8B F0   ........ ..u.....
DB10:  F7 66 0C 91 8B 46 0A F7  E6 03 D1 72 0C 3B 56 08   .f...F.. ...r.;V.
```

```
DB20:  77 07 72 06 3B 46 06 76  01 4E 33 D2 96 4F 75 07   w.r.;F.v .N3..Ou.
DB30:  F7 DA F7 D8 83 DA 00 5B  5E 5F 5D CA 08 00 55 8B   .......[ ^_]...U.
DB40:  EC 8B 46 08 8B 4E 0C 0B  C8 8B 4E 0A 75 09 8B 46   ..F..N.. ..N.u..F
DB50:  06 F7 E1 5D CA 08 00 53  F7 E1 8B D8 8B 46 06 F7   ...]...S .....F..
DB60:  66 0C 03 D8 8B 46 06 F7  E1 03 D3 5B 5D CA 08 00   f....F.. ...[]...
DB70:  32 ED E3 06 D1 E0 D1 D2  E2 FA CB 00 55 8B EC 53   2....... ....U..S
DB80:  8B 5E 06 FF 76 0A FF 76  08 FF 77 02 FF 37 0E E8   .^..v..v ..w..7..
DB90:  12 FF 89 57 02 89 07 5B  5D CA 06 00 55 8B EC 53   ...W...[ ]...U..S
DBA0:  8B 5E 06 FF 76 0A FF 76  08 FF 77 02 FF 37 0E E8   .^..v..v ..w..7..
DBB0:  8C FF 89 07 89 57 02 5B  5D CA 06 65 2B B2 00 09   .....W.[ ]..e+...
DBC0:  00 B0 9E 0D 02 00 B2 00  F0 FF B0 00 E6 05 B0 4D   ........ .......M
DBD0:  53 20 52 75 6E 2D 54 69  6D 65 20 4C 69 62 72 61   S Run-Ti me Libra
DBE0:  72 79 20 2D 20 43 6F 70  79 72 69 67 68 74 20 28   ry - Cop yright (
DBF0:  63 29 20 31 39 39 30 2C  20 4D 69 63 72 6F 73 6F   c) 1990,  Microso
DC00:  66 74 20 43 6F 72 70 18  00 0A 45 6E 74 65 72 20   ft Corp. ..Enter
DC10:  66 69 6E 67 65 72 20 6E  61 6D 65 73 20 28 73 61   finger n ames (sa
DC20:  6D 70 6C 65 64 20 61 6E  64 20 65 6E 72 6F 6C 6C   mpled an d enroll
DC30:  65 64 29 20 3A 20 28 6F  72 20 22 65 78 69 74 22   ed) : (o r "exit"
DC40:  29 20 3E 20 00 25 73 00  45 58 49 54 00 63 61 6E   ) > .%s. EXIT.can
DC50:  6E 6F 74 20 6F 70 65 6E  20 25 73 0A 00 25 73 00   not open  %s..%s.
DC60:  63 61 6E 6E 6F 74 20 6F  70 65 6E 20 25 73 0A 00   cannot o pen %s..
DC70:  3E 20 20 20 6D 61 74 63  68 21 00 3E 20 20 6E 6F   >   matc h!.>  no
DC80:  20 6D 61 74 63 68 21 B8  00 B2 00 58 00 B0 0A 00    match!. ...X....
DC90:  77 74 00 73 68 69 66 74  2E 64 61 74 00 25 32 68   wt.shift .dat.%2h
DCA0:  64 00 0A 00 C8 00 58 02  E8 03 54 0B B4 FB 38 FF   d.....X. ..T...8.
DCB0:  B0 04 B0 04 38 FF 00 00  65 72 72 5F 74 68 2E 63   ....8... err_th.c
DCC0:  66 67 00 72 74 00 25 68  64 20 25 68 64 00 25 68   fg.rt.%h d %hd.%h
DCD0:  64 20 00 25 68 64 20 25  68 64 00 25 68 64 20 25   d .%hd % hd.%hd %
DCE0:  68 64 00 25 68 64 20 25  68 64 5C 00 B2 00 12 00   hd.%hd % hd\.....
DCF0:  B0 60 01 80 01 00 00 00  00 11 00 22 00 34 00 45   .`...... ...".4.E
DD00:  00 57 00 69 00 7A 00 8C  00 9E 00 B0 00 C2 00 D4   .W.i.z.. ........
DD10:  00 E6 00 F9 00 0B 01 1E  01 31 01 44 01 58 01 6B   ........ .1.D.X.k
DD20:  01 7F 01 94 01 A8 01 BD  01 D2 01 E7 01 FD 01 13   ........ ........
DD30:  02 2A 02 41 02 58 02 70  02 89 02 A2 02 BC 02 D6   .*.A.X.p ........
DD40:  02 F1 02 0D 03 29 03 47  03 65 03 84 03 A4 03 C5   .....).G .e......
DD50:  03 E8 03 0B 04 30 04 56  04 7E 04 A7 04 D2 04 FF   .....0.V .~......
DD60:  04 2F 05 60 05 94 05 CA  05 03 06 40 06 80 06 C4   ./.`.... ...@....
DD70:  06 0C 07 58 07 AA 07 02  08 60 08 C6 08 33 09 AB   ...X.... .`...3..
DD80:  09 2D 0A BB 0A 58 0B 05  0C C6 0C 9F 0D 94 0E AA   .-...X.. ........
DD90:  0F EB 10 60 12 18 14 27  16 A9 18 CB 1B D0 1F 2A   ...`...' .......*
DDA0:  25 A6 2C DC 37 89 4A DC  6F C9 DF 00 00 01 00 01   %.,.7.J. o.......
DDB0:  00 02 00 02 00 03 00 03  00 04 00 04 00 05 00 06   ........ ........
DDC0:  00 06 00 07 00 07 00 08  00 08 00 09 00 09 00 0A   ........ ........
DDD0:  00 0B 00 0B 00 0C 00 0C  00 0D 00 0D 00 0E 00 0E   ........ ........
DDE0:  00 0F 00 0F 00 10 00 11  00 11 00 12 00 12 00 13   ........ ........
DDF0:  00 13 00 14 00 14 00 15  00 15 00 16 00 16 00 17   ........ ........
DE00:  00 17 00 18 00 18 00 18  00 19 00 19 00 1A 00 1A   ........ ........
DE10:  00 1A 00 1B 00 1C 00 1C  00 1D 00 1D 00 1D 00 1E   ........ ........
DE20:  00 1E 00 1F 00 1F 00 20  00 20 00 20 00 21 00 21   .......  . . .!.!
DE30:  00 22 00 22 00 22 00 23  00 23 00 23 00 24 00 24   .".".".# .#.#.$.$
DE40:  00 25 00 25 00 25 00 26  00 26 00 26 00 27 00 27   .%.%.%.& .&.&.'.'
DE50:  00 27 00 28 00 28 00 28  00 29 00 29 00 29 00 2A   .'.(.(.( .).).).*
DE60:  00 2A 00 2A 00 2B 00 2B  00 2B 00 2C 00 2C 00 2C   .*.*.+.+ .+.,.,.,
DE70:  00 2C 00 2D 00 10 27 0E  27 09 27 02 27 F7 26 E9   .,.-..'. '.'.'.&.
```

```
DE80:  26 D9 26 C5 26 AE 26 94  26 78 26 58 26 35 26 0F   &.&.&.&. &x&X&5&.
DE90:  26 E6 25 BB 25 8C 25 5B  25 26 25 EF 24 B4 24 77   &.%.%.%[ %&%.$.$w
DEA0:  24 37 24 F5 23 AF 23 67  23 1B 23 CE 22 7D 22 2A   $7$.#.#g #.#."}"*
DEB0:  22 D4 21 7B 21 20 21 C2  20 62 20 FF 1F 9A 1F 32   ".!{! !.  b ....2
DEC0:  1F C8 1E 5B 1E EC 1D 7B  1D 07 1D 91 1C 19 1C 9F   ...[...{ ........
DED0:  1B 22 1B A3 1A 23 1A A0  19 1B 19 95 18 0C 18 82   ."...#.. ........
DEE0:  17 F5 16 67 16 D7 15 46  15 B3 14 1E 14 88 13 F0   ...g...F ........
DEF0:  12 56 12 BB 11 1F 11 82  10 E3 0F 43 0F A2 0E FF   .V...... ...C....
DF00:  0D 5C 0D B7 0C 12 0C 6B  0B C4 0A 1C 0A 73 09 C9   .\.....k .....s..
DF10:  08 1F 08 74 07 C8 06 1C  06 6F 05 C2 04 15 04 67   ...t.... .o.....g
DF20:  03 B9 02 0B 02 5C 01 AE  00 00 00 00 00 AE 00 5C   .....\.. .......\
DF30:  01 0B 02 B9 02 67 03 15  04 C2 04 6F 05 1C 06 C8   .....g.. ...o....
DF40:  06 74 07 1F 08 C9 08 73  09 1C 0A C4 0A 6B 0B 12   .t.....s .....k..
DF50:  0C B7 0C 5C 0D FF 0D A2  0E 43 0F E3 0F 82 10 1F   ...\.... .C......
DF60:  11 BB 11 56 12 F0 12 88  13 1E 14 B3 14 46 15 D7   ...V.... .....F..
DF70:  15 67 16 F5 16 82 17 0C  18 95 18 1B 19 A0 19 23   .g...... .......#
DF80:  1A A3 1A 22 1B 9F 1B 19  1C 91 1C 07 1D 7B 1D EC   ..."....  .....{..
DF90:  1D 5B 1E C8 1E 32 1F 9A  1F FF 1F 62 20 C2 20 20   .[...2.. ...b .
DFA0:  21 7B 21 D4 21 2A 22 7D  22 CE 22 1B 23 67 23 AF   !{!.!*"} ".".#g#.
DFB0:  23 F5 23 37 24 77 24 B4  24 EF 24 26 25 5B 25 8C   #.#7$w$. $.$&%[%.
DFC0:  25 BB 25 E6 25 0F 26 35  26 58 26 78 26 94 26 AE   %.%.%.&5 &X&x&.&.
DFD0:  26 C5 26 D9 26 E9 26 F7  26 02 27 09 27 0E 27 10   &.&.&.&. &.'.'.'.
DFE0:  27 01 00 FF FF 00 00 FF  FF 49 6E 73 75 66 66 69   '....... .Insuffi
DFF0:  63 69 65 6E 74 20 6D 65  6D 6F 72 79 0A 00 20 67   cient me mory.. g
E000:  65 74 5F 69 6D 61 67 65  20 65 72 72 6F 72 3A 20   et_image  error:
E010:  66 69 6C 65 20 6E 6F 74  20 63 6F 6D 70 6C 65 74   file not  complet
E020:  65 0A 00 A0 01 40 00 80  01 00 00 47 3A 5C 46 49   e....@.. ...G:\FI
E030:  4E 47 45 52 5C 49 4D 47  44 31 31 5C 4B 03 B2 00   NGER\IMG D11\K...
E040:  0D 00 B0 E8 03 E8 03 46  50 32 30 30 30 2E 43 46   .......F P2000.CF
E050:  47 00 70 6F 73 69 74 69  6F 6E 20 58 20 6F 75 74   G.positi on X out
E060:  20 6F 66 20 72 61 6E 67  65 20 25 68 64 0A 00 70    of rang e %hd..p
E070:  6F 73 69 74 69 6F 6E 20  59 20 6F 75 74 20 6F 66   osition  Y out of
E080:  20 72 61 6E 67 65 20 25  68 64 0A 00 72 62 00 66    range % hd..rb.f
E090:  69 6C 65 20 25 73 20 6E  6F 74 20 66 6F 75 6E 64   ile %s n ot found
E0A0:  0A 00 20 2D 2D 20 69 6E  76 61 6C 69 64 20 6E 75   .. -- in valid nu
E0B0:  6D 62 65 72 20 6F 66 20  63 6F 6C 6F 6D 6E 73 3A   mber of  colomns:
E0C0:  20 25 68 64 20 69 6E 73  74 65 61 64 20 6F 66 20    %hd ins tead of
E0D0:  25 68 64 0A 00 20 2D 2D  20 69 6E 76 61 6C 69 64   %hd.. --  invalid
E0E0:  20 6E 75 6D 62 65 72 20  6F 66 20 72 6F 77 73 3A    number  of rows:
E0F0:  20 25 68 64 20 69 6E 73  74 65 61 64 20 6F 66 20    %hd ins tead of
E100:  25 68 64 0A 00 77 62 00  4B 4F 00 6C 73 65 6E 73   %hd..wb. KO.lsens
E110:  6F 72 2E 63 66 67 00 72  74 00 25 68 64 00 20 53   or.cfg.r t.%hd. S
E120:  65 6E 73 6F 72 20 23 20  25 68 64 20 6E 6F 74 20   ensor #  %hd not
E130:  66 6F 75 6E 64 20 69 6E  20 25 73 0A 00 25 68 64   found in  %s..%hd
E140:  00 25 68 64 20 25 68 64  20 25 68 64 20 25 68 64   .%hd %hd  %hd %hd
E150:  20 25 68 64 20 25 68 64  20 25 68 64 00 20 25 73    %hd %hd  %hd. %s
E160:  20 6E 6F 74 20 66 6F 75  6E 64 0A 00 47 3A 5C 46    not fou nd..G:\F
E170:  49 4E 47 45 52 5C 49 4D  47 49 5C 00 47 3A 5C 46   INGER\IM GI\.G:\F
E180:  49 4E 47 45 52 5C 49 4D  47 44 5C 00 47 3A 5C 46   INGER\IM GD\.G:\F
E190:  49 4E 47 45 52 5C 49 4D  47 44 31 31 5C 00 49 4D   INGER\IM GD11\.IM
E1A0:  47 44 5C 00 00 43 50 53  44 41 54 5C 00 25 73 25   GD\..CPS DAT\.%s%
E1B0:  73 2E 63 70 73 00 77 62  00 25 73 25 73 2E 63 70   s.cps.wb .%s%s.cp
E1C0:  73 00 72 62 00 00 00 DE  01 00 00 00 00 05 8B 01   s.rb.... ........
E1D0:  B2 00 15 00 B0 5F 43 5F  46 49 4C 45 5F 49 4E 46   ....._C_ FILE_INF
```

```
E1E0:  4F 3D 0D 00 B2 00 1C 00  B0 14 00 81 81 81 01 01   O=...... ........
E1F0:  07 00 B2 00 19 00 B0 CB  06 FA 1D 04 00 B2 00 0D   ........ ........
E200:  00 B0 FF FF FF FF 70 0F  00 00 00 00 00 16 02 02   ......p. ........
E210:  18 0D 09 0C 0C 0C 07 08  16 16 FF 02 0D 12 02 FF   ........ ........
E220:  5C 00 5C 00 00 00 70 0C  FA 1D 00 00 70 0C FA 1D   \.\...p. ....p...
E230:  01 2F 00 B2 00 0B 00 B0  02 01 02 00 B2 00 0A 00   ./...... ........
E240:  B0 02 02 02 00 B2 00 0A  00 B0 84 03 02 00 B2 00   ........ ........
E250:  0A 00 B0 02 04 02 00 B2  00 B4 00 B0 01 00 00 02   ........ ........
E260:  04 00 B2 00 EC 00 B0 E0  07 FA 1D 04 00 B2 00 0C   ........ ........
E270:  00 B0 20 09 2D 0D 5D 00  5D 00 06 00 00 06 00 01   .. .-.]. ].......
E280:  00 00 10 00 03 06 00 06  02 10 04 45 45 45 05 05   ........ ...EEE..
E290:  05 05 05 35 30 00 50 00  00 00 00 20 20 30 50 58   ...50.P. ...  0PX
E2A0:  07 08 00 30 30 30 57 50  07 00 00 20 20 00 00 00   ...000WP ...  ...
E2B0:  00 00 08 60 60 60 60 60  60 00 00 70 70 78 78 78   ...````` `..ppxxx
E2C0:  78 08 07 08 00 00 07 00  08 08 08 00 00 08 00 08   x....... ........
E2D0:  00 00 08 28 6E 75 6C 6C  29 06 68 00 B2 00 10 00   ...(null ).h.....
E2E0:  B0 03 00 00 20 BC 02 E5  0A BC 02 E5 0A BC 02 E5   .... ... ........
E2F0:  0A BC 02 E5 0A BC 02 E5  0A BC 02 E5 0A 00 00 00   ........ ........
E300:  00 01 01 00 23 00 B2 20  09 00 B0 28 28 28 28 28   ....#..  ...(((((
E310:  05 00 B2 20 12 00 B0 48  01 00 B2 10 0F 00 B0 84   ... ...H ........
E320:  0A 00 B0 10 10 10 10 10  10 10 81 81 81 81 81 81   ........ ........
E330:  0D 00 B2 01 14 00 B0 10  10 10 10 10 10 82 82 82   ........ ........
E340:  82 82 82 0C 00 B2 02 14  00 B0 10 10 10 10 20 05   ........ ...... .
E350:  00 B2 00 85 00 B0 DC 00  DC 00 DC 00 00 00 00 00   ........ ........
E360:  9D 0D 0C 00 B2 00 0E 00  B0 4C 0F E5 0A FA 1D 9E   ........ .L......
E370:  0D FA 1D 9E 0D FA 1D 9E  0D 9E 0D 9E 0D 9E 0D FA   ........ ........
E380:  1D FA 1D FA 1D FA 1D 9E  0D 9E 0D 9E 0D 9E 0D 9E   ........ ........
E390:  0D 9E 0D 9E 0D 9E 0D 9E  0D 9E 0D 9E 0D 9E 0D 9E   ........ ........
E3A0:  0D 9E 0D 9E 0D 9E 0D 9E  0D 9E 0D 9E 0D 9E 0D 9E   ........ ........
E3B0:  0D 9E 0D 9E 0D 9E 0D 9E  0D FA 1D 9E 0D 9E 0D 19   ........ ........
E3C0:  1D 9E 0D FA 1D 9E 0D 9E  0D 9E 0D 9E 0D 9E 0D 9E   ........ ........
E3D0:  0D 9E 0D 9E 0D 9E 0D 9E  0D 9E 0D 9E 0D 9E 0D FA   ........ ........
E3E0:  1D FA 1D 9E 0D 9E 0D FA  1D 3C 3C 4E 4D 53 47 3E   ........ .<<NMSG>
E3F0:  3E 00 00 52 36 30 30 30  0D 0A 2D 20 73 74 61 63   >..R6000 ..- stac
E400:  6B 20 6F 76 65 72 66 6C  6F 77 0D 0A 00 03 00 52   k overfl ow.....R
E410:  36 30 30 33 0D 0A 2D 20  69 6E 74 65 67 65 72 20   6003..-  integer
E420:  64 69 76 69 64 65 20 62  79 20 30 0D 0A 00 09 00   divide b y 0.....
E430:  52 36 30 30 39 0D 0A 2D  20 6E 6F 74 20 65 6E 6F   R6009..-  not eno
E440:  75 67 68 20 73 70 61 63  65 20 66 6F 72 20 65 6E   ugh spac e for en
E450:  76 69 72 6F 6E 6D 65 6E  74 0D 0A 00 FC 00 0D 0A   vironmen t.......
E460:  00 FF 00 72 75 6E 2D 74  69 6D 65 20 65 72 72 6F   ...run-t ime erro
E470:  72 20 00 02 00 52 36 30  30 32 0D 0A 2D 20 66 6C   r ...R60 02..- fl
E480:  6F 61 74 69 6E 67 2D 70  6F 69 6E 74 20 73 75 70   oating-p oint sup
E490:  70 6F 72 74 20 6E 6F 74  20 6C 6F 61 64 65 64 0D   port not  loaded.
E4A0:  0A 00 01 00 52 36 30 30  31 0D 0A 2D 20 6E 75 6C   ....R600 1..- nul
E4B0:  6C 20 70 6F 69 6E 74 65  72 20 61 73 73 69 67 6E   l pointe r assign
E4C0:  6D 65 6E 74 0D 0A 00 FF  FF FF 61 01 B2 00 09 00   ment.... ..a.....
E4D0:  B0 FF FF FF FF FF FF FF  FF FF FF FF FF FF FF FF   ........ ........
E4E0:  12 00 E5 0A 00 00 91 06  20 4E E1 1E BB 1E 01 00   ........  N......
E4F0:  52 42 8C C0 05 10 00 0E  1F A3 04 00 03 06 0C 00   RB...... ........
E500:  8E C0 8B 0E 06 00 8B F9  4F 8B F7 FD F3 A4 8B 16   ........ O.......
E510:  0E 00 50 B8 38 00 50 CB  8C C3 8C D8 2B C2 8E D8   ..P.8.P. ....+...
E520:  8E C0 BF 0F 00 B9 10 00  B0 FF F3 AE 47 8B F7 8B   ........ ....G...
E530:  C3 2B C2 8E C0 BF 0F 00  B1 04 8B C6 F7 D0 D3 E8   .+...... ........
```

```
E540:  74 09 8C DA 2B D0 8E DA  83 CE F0 8B C7 F7 D0 D3   t...+... ........
E550:  E8 74 09 8C C2 2B D0 8E  C2 83 CF F0 AC 8A D0 4E   .t...+.. .......N
E560:  AD 8B C8 46 8A C2 24 FE  3C B0 75 06 AC F3 AA EB   ...F..$. <.u.....
E570:  07 90 3C B2 75 6B F3 A4  8A C2 A8 01 74 BA BE 2D   ..<.uk.. ....t..-
E580:  01 0E 1F 8B 1E 04 00 FC  33 D2 AD 8B C8 E3 13 8B   ........ 3.......
E590:  C2 03 C3 8E C0 AD 8B F8  83 FF FF 74 11 26 01 1D   ........ ...t.&..
E5A0:  E2 F3 81 FA 00 F0 74 16  81 C2 00 10 EB DC 8C C0   ......t. ........
E5B0:  40 8E C0 83 EF 10 26 01  1D 48 8E C0 EB E2 8B C3   @.....&. .H......
E5C0:  8B 3E 08 00 8B 36 0A 00  03 F0 01 06 02 00 2D 10   .>...6.. ......-.
E5D0:  00 8E D8 8E C0 BB 00 00  FA 8E D6 8B E7 FB 2E FF   ........ ........
E5E0:  2F B4 40 BB 02 00 B9 16  00 8C CA 8E DA BA 17 01   /.@..... ........
E5F0:  CD 21 B8 FF 4C CD 21 50  61 63 6B 65 64 20 66 69   .!..L.!P acked fi
E600:  6C 65 20 69 73 20 63 6F  72 72 75 70 74 58 02 03   le is co rruptX..
E610:  01 F3 00 E3 00 D8 00 BE  00 B2 00 A9 00 9C 00 87   ........ ........
E620:  00 6D 00 61 00 4D 00 3B  00 2E 00 1C 00 41 01 7C   .m.a.M.; .....A.|
E630:  01 75 01 6D 01 64 01 5D  01 55 01 27 02 22 02 1D   .u.m.d.] .U.'."..
E640:  02 18 02 13 02 0E 02 09  02 EF 01 E7 01 DB 01 C3   ........ ........
E650:  02 B7 02 FF 02 F8 02 F0  02 E7 02 E0 02 D8 02 D7   ........ ........
E660:  03 CC 03 C4 03 A8 03 9D  03 6B 03 60 03 58 03 3F   ........ .k.`.X.?
E670:  03 37 03 2F 03 71 04 0B  05 BD 04 B8 04 B0 04 A9   .7./.q.. ........
E680:  04 A1 04 95 04 8E 04 86  04 93 07 5F 07 1B 07 FE   ........ ..._....
E690:  06 DA 06 64 06 EE 05 AA  05 8E 05 F8 08 C8 08 A4   ...d.... ........
E6A0:  08 1F 08 EF 09 B8 09 12  0C EE 0B E3 0B A1 0B 3E   ........ .......>
E6B0:  10 74 11 69 11 27 11 9B  10 E6 15 11 1A FF 19 6A   .t.i.'.. .......j
E6C0:  18 58 18 3F 17 FB 16 C4  16 8D 16 58 1D D5 1C B2   .X.?.... ...X....
E6D0:  1C A7 1C 8F 1C 79 1C 6E  1C 56 1C 32 1C E6 1B C8   .....y.n .V.2....
E6E0:  1B 80 1B 6D 1B C9 24 BE  24 A6 24 90 24 7E 24 15   ...m..$. $.$.$~$.
E6F0:  24 93 25 D1 25 90 26 7E  26 73 26 3E 26 A8 27 95   $.%.%.&~ &s&>&.'.
E700:  27 86 27 38 27 1B 27 E1  26 8B 28 1C 29 FC 28 F5   '.'8'.'. &.(.).(.
E710:  28 EC 28 E5 28 DD 28 D5  28 CC 28 C5 28 BD 28 B5   (.(.(.(. (.(.(.(.
E720:  28 80 29 79 29 DF 29 CD  29 C6 29 92 2D 89 2D 0E   (.)y).). ).).-.-.
E730:  2D FC 2C F1 2C C1 2C 93  2C 88 2C 58 2C 2A 2C E0   -.,.,.,. ,.,X,*,.
E740:  2B 50 30 1E 30 BB 2D 90  30 79 30 8D 34 0C 34 05   +P0.0.-. 0y0.4.4.
E750:  34 FD 33 F4 33 ED 33 DF  33 3E 33 2B 33 23 32 11   4.3.3.3. 3>3+3#2.
E760:  32 37 37 30 37 28 37 1F  37 18 37 0A 37 97 36 84   27707(7. 7.7.7.6.
E770:  36 6D 35 5B 35 7A 37 94  37 2E 3A F2 39 41 39 1C   6m5[5z7. 7.:.9A9.
E780:  39 F7 38 81 38 67 38 2A  38 99 3B 7E 3B 63 3B 38   9.8.8g8* 8.;~;c;8
E790:  3B 1D 3B AD 3A CE 3D 9F  3D 98 3E 7E 3F 6E 3F 55   ;.;.:.=. =.>~?n?U
E7A0:  3F 8F 41 84 41 6C 41 F1  40 C6 40 A2 40 89 40 7E   ?.A.AlA. @.@.@.@~
E7B0:  40 66 40 4B 40 33 40 14  40 0D 40 E7 3F E0 3F 3C   @f@K@3@. @.@.?.?<
E7C0:  42 35 42 AE 43 A3 43 73  43 0F 47 FE 46 ED 46 7D   B5B.C.Cs C.G.F.F}
E7D0:  46 6B 46 60 46 30 46 F5  45 AE 45 6B 45 D8 44 E9   FkF`F0F. E.EkE.D.
E7E0:  48 CF 48 C1 48 3C 48 26  48 CF 4D C8 4D B7 4D B0   H.H.H<H& H.M.M.M.
E7F0:  4D 59 51 E1 50 CE 50 FD  4F EA 4F D4 4F C1 4F 97   MYQ.P.P. O.O.O.O.
E800:  4F C0 53 AA 53 9D 55 22  55 C9 55 2A 57 22 56 AB   O.S.S.U" U.U*W"V.
E810:  58 A6 57 3B 5A 1F 5A 74  5A 21 5E 12 5E 09 5E F0   X.W;Z.Zt Z!^.^.^.
E820:  5D E7 5D D1 5D 48 5D 3D  5D 2A 5D 04 5D 59 60 3A   ].].]H]= ]*].]Y`:
E830:  60 F5 5F D6 5F 9A 62 83  62 73 63 5B 63 71 66 66   `._._.b. bsc[cqff
E840:  66 36 66 02 65 F9 64 39  67 20 67 2A 68 CE 67 51   f6f.e.d9 g g*h.gQ
E850:  68 40 68 DE 69 D0 69 B4  69 9D 69 81 69 6A 69 4E   h@h.i.i. i.i.ijiN
E860:  69 37 69 20 69 09 69 ED  68 C9 68 34 6A 9D 6A 8B   i7i i.i. h.h4j.j.
E870:  6A 6C 6A 2E 6B 0D 6B 10  6D 96 6C 74 6C 52 6C 33   jlj.k.k. m.ltlRl3
E880:  6C 0B 6C BD 6B AE 6B 88  6B 99 6F 5D 6F 3B 6F 1B   l.l.k.k. k.o]o;o.
E890:  6F F0 6E 3D 6E F7 6D D5  6D B3 6D 94 6D CB 70 87   o.n=n.m. m.m.m.p.
```

MATCH.DMP Thursday, January 6, 1994 12:04pm Page 70


```
E8A0:  70 7D 70 37 70 15 70 6F  72 1E 72 FC 71 DA 71 B8   p}p7p.po r.r.q.q.
E8B0:  71 97 71 78 71 55 71 08  71 01 71 CD 76 AF 76 8D   q.qxqUq. q.q.v.v.
E8C0:  76 6B 76 4C 76 13 76 CF  75 C5 75 9B 75 94 75 43   vkvLv.v. u.u.u.uC
E8D0:  75 21 75 F6 74 43 74 FD  73 DB 73 B9 73 9A 73 5A   u!u.tCt. s.s.s.sZ
E8E0:  7A F4 79 D2 79 B1 79 92  79 35 79 F1 78 CF 78 AD   z.y.y.y. y5y.x.x.
E8F0:  78 8B 78 6C 78 07 78 C9  77 A7 77 85 77 64 77 42   x.xlx.x. w.w.wdwB
E900:  77 22 77 AD 7E A2 7E 7C  7E 51 7E 42 7E 03 7E F4   w"w.~.~| ~Q~B~.~.
E910:  7D B5 7D A6 7D 72 7D 63  7D 24 7D 15 7D D6 7C C7   }.}.}r}c }$}.}.|.
E920:  7C 93 7C 84 7C 65 7C 41  7C 32 7C FE 7B EF 7B 58   |.|.|e|A |2|.{.{X
E930:  7F 26 7F D4 80 95 80 56  80 17 80 46 81 B6 81 AF   .&.....V ...F....
E940:  81 A7 81 90 81 E0 82 D9  82 AB 82 A4 82 D6 85 C9   ........ ........
E950:  85 86 86 65 86 41 86 33  86 AC 88 E8 88 D2 88 F1   ...e.A.3 ........
E960:  89 D8 89 AC 89 8E 89 5F  89 41 89 6F 8A 61 8A 4E   ......._ .A.o.a.N
E970:  8A 3D 8A 23 8A 01 8D DD  8C 4B 8C 27 8C BE 8F B0   .=.#.... .K.'....
E980:  8E 00 8E CC 90 0F 92 F4  91 C2 91 90 91 73 92 65   ........ .....s.e
E990:  92 98 92 B8 92 DE 92 21  96 C3 94 A5 94 9B 94 91   .......! ........
E9A0:  94 79 94 6F 94 65 94 7C  9D 0E 9D B4 9C 79 9E 58   .y.o.e.| .....y.X
E9B0:  9E 21 9E D7 9D C6 9D C2  A2 B2 A2 8B A2 79 A2 55   .!...... .....y.U
E9C0:  A2 19 A2 F0 A2 EC A3 D0  A3 C3 A3 9F A3 28 A3 18   ........ .....(..
E9D0:  A3 6E A5 5E A5 0C A5 F9  A4 E9 A4 D9 A4 C1 A4 9B   .n.^.... ........
E9E0:  A4 80 A4 55 A4 EB A5 99  A5 86 A5 7D A7 57 A7 3C   ...U.... ...}.W.<
E9F0:  A7 00 A7 EE A6 D9 A6 B0  A6 9D A6 8C A6 79 A6 68   ........ .....y.h
EA00:  A6 4F A6 51 A8 36 A8 09  A8 41 A9 35 A9 20 A9 12   .O.Q.6.. .A.5. ..
EA10:  A9 D3 A8 B9 A8 AD A8 88  A8 93 A9 8E A9 89 A9 81   ........ ........
EA20:  A9 7A A9 72 A9 E6 A9 D1  A9 BC A9 24 AA 41 AA 7D   .z.r.... ...$.A.}
EA30:  AA A5 AA 18 AB F5 AA D2  AA 68 AB 45 AB CB AB 90   ........ .h.E....
EA40:  AB 85 AB 31 AC F6 AB EB  AB AD AC 8A AC 67 AC 03   ...1.... .....g..
EA50:  AD E0 AC A4 AD 94 AD 72  AD 49 AD 36 AD 31 AE 1D   .......r .I.6.1..
EA60:  AE EA AD D7 AD 41 AE 70  AE FE AE 03 AF 0A AF 25   .....A.p .......%
EA70:  AF 5F AF D0 D9 80 B0 19  B4 34 B5 27 B5 0D B5 EC   ._...... .4.'....
EA80:  B4 D0 B4 AB B4 95 B5 7A  B5 55 B5 C1 B5 0D B9 44   .......z .U.....D
EA90:  B9 F1 BA 1C BB 01 BC BE  BC CF BD 72 BD AD BF F9   ........ ...r....
EAA0:  BD C0 C2 AE C2 20 C2 07  C6 E9 C5 0E D0 1D D1 23   ........ .......#
EAB0:  D1 C9 D2 6E D5 45 D5 F4  D5 D0 D5 43 D6 28 D6 4A   ...n.E.. ...C.(.J
EAC0:  00 4A EA 4C EA 4E EA 50  EA 52 EA 54 EA 56 EA 58   .J.L.N.P .R.T.V.X
EAD0:  EA 5A EA 5C EA 5E EA 60  EA 62 EA 64 EA 66 EA 68   .Z.\.^.` .b.d.f.h
EAE0:  EA 6A EA 6C EA 6E EA 70  EA 72 EA 74 EA 76 EA 78   .j.l.n.p .r.t.v.x
EAF0:  EA 7A EA 7C EA 7E EA 80  EA 82 EA 84 EA 86 EA 88   .z.|.~.. ........
EB00:  EA 8A EA 8C EA 8E EA 90  EA 92 EA 94 EA 96 EA 98   ........ ........
EB10:  EA 9A EA 9C EA 9E EA A0  EA A2 EA A4 EA A6 EA A8   ........ ........
EB20:  EA AA EA AC EA AE EA B0  EA B2 EA B4 EA B6 EA B8   ........ ........
EB30:  EA BA EA BC EA BE EA C0  EA C2 EA 36 EA 69 E6 48   ........ ...6.i.H
EB40:  EA A4 E6 9E E6 7E E8 C4  EA 0A E9 0E E9 12 E9 16   .....~.. ........
EB50:  E9 1A E9 1E E9 00 00 00  00 00 00 00 00 00 00 00   ........ ........
EB60:  00 00 00 00 00 00 00 00  00 00 00 00 00 00 00 00   ........ ........
EB70:  00
```


## APPENDIX D

```
B_ENROLL.DMP                Tuesday, July 13, 1993 1:12 pm                Page 1

PSA Binary File Dump utility version 1.9
Copyright (C) 1984 by Phoenix Software Associates, Ltd.

                                 Dump of B_ENROLL.PCK
   0:  4D 5A 6B 01 AF 00 00 00  20 00 8A 21 FF FF B5 32   MZk..... ..!...2
  10:  80 00 00 00 12 00 37 15  1E 00 00 00 01 00 00 00   ......7. ........
  20:  00 00 00 00 00 00 00 00  00 00 00 00 00 00 00 00   ........ ........
  30:  00 00 00 00 00 00 00 00  00 00 00 00 00 00 00 00   ........ ........
  40:  00 00 00 00 00 00 00 00  00 00 00 00 00 00 00 00   ........ ........
  50:  00 00 00 00 00 00 00 00  00 00 00 00 00 00 00 00   ........ ........
  60:  00 00 00 00 00 00 00 00  00 00 00 00 00 00 00 00   ........ ........
  70:  00 00 00 00 00 00 00 00  00 00 00 00 00 00 00 00   ........ ........
  80:  00 00 00 00 00 00 00 00  00 00 00 00 00 00 00 00   ........ ........
  90:  00 00 00 00 00 00 00 00  00 00 00 00 00 00 00 00   ........ ........
  A0:  00 00 00 00 00 00 00 00  00 00 00 00 00 00 00 00   ........ ........
  B0:  00 00 00 00 00 00 00 00  00 00 00 00 00 00 00 00   ........ ........
  C0:  00 00 00 00 00 00 00 00  00 00 00 00 00 00 00 00   ........ ........
  D0:  00 00 00 00 00 00 00 00  00 00 00 00 00 00 00 00   ........ ........
  E0:  00 00 00 00 00 00 00 00  00 00 00 00 00 00 00 00   ........ ........
  F0:  00 00 00 00 00 00 00 00  00 00 00 00 00 00 00 00   ........ ........
 100:  00 00 00 00 00 00 00 00  00 00 00 00 00 00 00 00   ........ ........
 110:  00 00 00 00 00 00 00 00  00 00 00 00 00 00 00 00   ........ ........
 120:  00 00 00 00 00 00 00 00  00 00 00 00 00 00 00 00   ........ ........
 130:  00 00 00 00 00 00 00 00  00 00 00 00 00 00 00 00   ........ ........
 140:  00 00 00 00 00 00 00 00  00 00 00 00 00 00 00 00   ........ ........
 150:  00 00 00 00 00 00 00 00  00 00 00 00 00 00 00 00   ........ ........
 160:  00 00 00 00 00 00 00 00  00 00 00 00 00 00 00 00   ........ ........
 170:  00 00 00 00 00 00 00 00  00 00 00 00 00 00 00 00   ........ ........
 180:  00 00 00 00 00 00 00 00  00 00 00 00 00 00 00 00   ........ ........
 190:  00 00 00 00 00 00 00 00  00 00 00 00 00 00 00 00   ........ ........
 1A0:  00 00 00 00 00 00 00 00  00 00 00 00 00 00 00 00   ........ ........
 1B0:  00 00 00 00 00 00 00 00  00 00 00 00 00 00 00 00   ........ ........
 1C0:  00 00 00 00 00 00 00 00  00 00 00 00 00 00 00 00   ........ ........
 1D0:  00 00 00 00 00 00 00 00  00 00 00 00 00 00 00 00   ........ ........
 1E0:  00 00 00 00 00 00 00 00  00 00 00 00 00 00 00 00   ........ ........
 1F0:  00 00 00 00 00 00 00 00  00 00 00 00 00 00 00 00   ........ ........
 200:  55 8B EC 81 EC 0E 00 57  56 8E 06 E4 0A 26 C7 06   U......W V....&..
 210:  F4 00 01 00 8E 06 E6 0A  26 C7 06 EC 00 01 00 8E   ........ &.......
 220:  06 E8 0A 26 C7 06 C8 D1  00 00 8E 06 EA 0A 26 C7   ...&.... ......&.
 230:  06 44 08 00 00 8E 06 E6  0A 26 83 3E EC 00 00 75   .D...... .&.>...u
 240:  03 E9 05 00 9A 72 03 5B  0C B8 42 00 1E 50 9A BA   .....r.[ ..B..P..
 250:  0A AF 0D 83 C4 04 B8 6A  D1 B9 62 23 51 50 BA 63   .......j ..b#QP.c
 260:  00 1E 52 9A FE 0A AF 0D  83 C4 08 B8 6A D1 B9 62   ..R..... ....j..b
 270:  23 51 50 9A 3A 2A AF 0D  83 C4 04 B8 66 00 1E 50   #QP.:*.. ....f..P
 280:  B8 6A D1 B9 62 23 51 50  9A 00 26 AF 0D 83 C4 08   .j..b#QP ..&.....
 290:  3D 00 00 75 03 E9 00 01  C7 46 FE 00 00 C7 46 F2   =..u.... .F....F.
 2A0:  01 00 C7 46 F4 00 00 E9  08 00 83 46 F2 01 83 56   ...F.... ...F...V
 2B0:  F4 00 83 7E F4 00 7E 03  E9 56 00 7D 03 E9 09 00   ...~..~. .V.}....
 2C0:  83 7E F2 05 76 03 E9 48  00 83 7E FE 04 7C 03 E9   .~..v..H ..~..|..
 2D0:  1E 00 8B 46 F2 8B 56 F4  8E 06 EC 0A 8B 5E FE D1   ...F..V. .....^..
 2E0:  E3 D1 E3 26 89 87 42 CE  26 89 97 44 CE E9 1B 00   ...&..B. &..D....
 2F0:  8B 46 F2 8B 56 F4 8E 06  EE 0A 8B 5E FE D1 E3 D1   .F..V... ...^....
 300:  E3 26 89 87 0C C1 26 89  97 0E C1 FF 46 FE E9 99   .&....&. ....F...
```

```
310:  FF 83 7E FE 04 7C 03 E9  18 00 B8 6A D1 B9 62 23   ..~..|.. ...j..b#
320:  51 50 B8 6B 00 1E 50 9A  BA 0A AF 0D 83 C4 08 E9   QP.k..P. ........
330:  31 00 8E 06 EE 0A 8B 5E  FE D1 E3 D1 E3 2B C0 26   1......^ .....+.&
340:  89 87 0E C1 26 89 87 0C  C1 9A 0E 00 25 00 3D FD   ....&... ....%.=.
350:  FF 74 03 E9 0D 00 B8 84  00 1E 50 9A BA 0A AF 0D   .t...... ..P.....
360:  83 C4 04 B8 99 00 1E 50  9A BA 0A AF 0D 83 C4 04   .......P ........
370:  B8 6A D1 B9 62 23 51 50  BA BB 00 1E 52 9A FE 0A   .j..b#QP ....R...
380:  AF 0D 83 C4 08 B8 6A D1  B9 62 23 51 50 9A 3A 2A   ......j. .b#QP.:*
390:  AF 0D 83 C4 04 E9 E3 FE  9A F6 27 AF 0D B8 00 00   ........ ..'.....
3A0:  E9 00 00 5E 5F 8B E5 5D  CB 55 8B EC 81 EC 00 00   ...^_..] .U......
3B0:  57 56 FF 76 08 FF 76 06  B8 6A D1 B9 62 23 51 50   WV.v..v. .j..b#QP
3C0:  B8 C9 00 1E 50 FF 76 0C  FF 76 0A 9A 96 28 AF 0D   ....P.v. .v...(..
3D0:  83 C4 10 B8 00 00 E9 00  00 5E 5F 8B E5 5D CB 55   ........ .^_..].U
3E0:  8B EC 81 EC 00 00 57 56  FF 76 0C FF 76 0A FF 76   ......WV .v..v..v
3F0:  08 FF 76 06 9A A5 00 71  0D 83 C4 08 E9 00 00 5E   ..v....q .......^
400:  5F 8B E5 5D CB 55 8B EC  81 EC 00 00 57 56 C4 5E   _..].U.. ....WV.^
410:  06 26 C6 47 04 00 FF 76  14 FF 76 12 FF 76 08 FF   .&.G...v ..v..v..
420:  76 06 9A 0A 00 71 0D 83  C4 08 5E 5F 8B E5 5D CB   v....q.. ..^_..].
430:  55 8B EC 81 EC 00 00 57  56 5E 5F 8B E5 5D CB 55   U......W V^_..].U
440:  8B EC 81 EC 00 00 57 56  5E 5F 8B E5 5D CB 55 8B   ......WV ^_..].U.
450:  EC 81 EC 00 00 57 56 5E  5F 8B E5 5D CB 00 55 8B   .....WV^ _..]..U.
460:  EC 81 EC 04 00 57 56 8E  06 F0 0A 26 C7 06 EA 00   .....WV. ...&....
470:  01 00 B8 FF FF 8E 06 F2  0A 26 A3 30 00 26 A3 2E   ........ .&.0.&..
480:  00 26 C7 06 32 00 FF FF  B8 6E 08 B9 AA 14 51 50   .&..2... .n....QP
490:  9A 3E 33 25 00 83 C4 04  B8 00 00 B9 62 23 51 50   .>3%.... ....b#QP
4A0:  9A 3E 33 25 00 83 C4 04  9A 61 01 0A 06 9A 11 33   .>3%.... .a.....3
4B0:  25 00 C7 46 FE 00 00 E9  03 00 FF 46 FE 8B 46 FE   %..F.... ...F..F.
4C0:  39 06 D2 00 7F 03 E9 66  00 FF 76 FE 9A 91 31 25   9......f ..v...1%
4D0:  00 83 C4 02 40 74 03 E9  06 00 B8 FF FF E9 A7 00   ....@t.. ........
4E0:  9A 20 33 25 00 9A 3D 01  25 00 89 46 FC 9A 9E 32   . 3%..=. %..F...2
4F0:  25 00 83 7E FC FF 74 03  E9 06 00 B8 FF FF E9 86   %..~..t. ........
500:  00 83 7E FE 00 74 03 E9  08 00 9A 23 31 25 00 E9   ..~..t.. ...#1%..
510:  1A 00 9A 00 00 0A 06 8E  06 F4 0A 26 83 3E 54 EB   ........ ...&.>T.
520:  05 7C 03 E9 06 00 B8 FF  FF E9 5B 00 E9 8B FF 9A   .|...... ..[.....
530:  B9 0A 25 00 40 74 03 E9  06 00 B8 FF FF E9 47 00   ..%.@t.. ......G.
540:  FF 36 D2 00 9A 2F 33 25  00 83 C4 02 8E 06 F6 0A   .6.../3% ........
550:  26 C6 06 70 D1 00 B8 01  00 50 B8 6E 08 B9 AA 14   &..p.... .P.n....
560:  51 50 B8 D0 00 1E 50 B8  6A D1 06 50 06 50 9A 05   QP....P. j..P.P..
570:  02 00 00 83 C4 12 8E 06  F0 0A 26 C7 06 EA 00 00   ........ ..&.....
580:  00 B8 00 00 E9 00 00 5E  5F 8B E5 5D CB 55 8B EC   .......^ _..].U..
590:  81 EC 0A 00 57 56 8E 06  F8 0A 26 A1 00 00 89 46   ....WV.. ..&....F
5A0:  F6 26 A1 02 00 89 46 FE  26 C7 06 00 00 00 00 26   .&....F. &......&
5B0:  C7 06 02 00 00 00 8E 06  FA 0A 26 C7 06 34 00 00   ........ ..&..4..
5C0:  00 C7 46 F8 00 00 E9 03  00 FF 46 F8 8B 46 F6 39   ..F..... ..F..F.9
5D0:  46 F8 7C 03 E9 FC 00 8E  06 FC 0A 26 C4 1E 68 08   F.|..... ...&..h.
5E0:  8B 76 F8 D1 E6 26 8B 00  89 46 FA 83 7E FA FF 74   .v...&.. .F..~..t
5F0:  03 E9 03 00 E9 D2 FF FF  76 FA 8E 06 FE 0A 26 FF   ........ v.....&.
600:  36 5A 08 26 FF 36 58 08  9A 0C 00 AA 08 83 C4 06   6Z.&.6X. ........
610:  89 46 FA 83 7E FA FF 74  03 E9 03 00 E9 B1 00 B8   .F..~..t ........
620:  1A 00 F7 6E FA 8B D8 8E  06 FE 0A 26 C4 36 58 08   ...n.... ...&.6X.
630:  26 8B 40 0A 89 46 FC B8  1A 00 F7 6E FA 8B D8 8E   &.@..F.. ...n....
640:  06 FE 0A 26 C4 36 58 08  26 81 60 18 7F FF B8 1A   ...&.6X. &.`.....
650:  00 F7 6E FC 8B D8 8E 06  FE 0A 26 C4 36 58 08 26   ..n..... ..&.6X.&
```

```
660:  81 60 18 7F FF FF 76 FA  FF 76 FC 9A 9B 02 25 00   .`....v. .v....%.
670:  83 C4 04 B8 1A 00 F7 6E  FC 8B D8 8E 06 FE 0A 26   .......n .......&
680:  C4 36 58 08 26 F6 40 18  08 75 03 E9 3F 00 B8 1A   .6X.&.@. .u..?...
690:  00 F7 6E FC 8B D8 8E 06  FE 0A 26 C4 36 58 08 26   ..n..... ..&.6X.&
6A0:  8B 40 04 8B C8 B8 1A 00  F7 6E FC 8B D8 8E 06 FE   .@...... .n......
6B0:  0A 26 C4 36 58 08 26 39  48 10 74 03 E9 0E 00 FF   .&.6X.&9 H.t.....
6C0:  76 FA FF 76 FC 9A 9B 02  25 00 83 C4 04 E9 27 FF   v..v.... %.....'.
6D0:  E9 F6 FE B8 00 00 50 9A  20 0B AA 08 83 C4 02 B8   ......P. ........
6E0:  00 00 E9 00 00 5E 5F 8B  E5 5D CB 55 8B EC 81 EC   .....^_. .].U....
6F0:  0C 00 57 56 B8 1A 00 8E  06 FA 0A 26 F7 2E 34 00   ..WV.... ...&..4.
700:  8B D8 8E 06 F8 0A B8 1A  00 F7 6E 06 8E 06 FE 0A   ........ ..n.....
710:  8E 06 F8 0A 8C C1 8E C1  8C C2 8E C2 50 8D 87 0C   ........ ....P...
720:  04 89 46 FC 8C 46 FE 58  8C C2 8E 06 FE 0A 26 8B   ..F..F.X ......&.
730:  1E 58 08 26 8B 36 5A 08  03 D8 51 06 1E 56 8B F3   .X.&.6Z. ..Q..V..
740:  1F C4 7E FC B9 0D 00 F3  A5 1F 07 59 B8 1A 00 8E   ..~..... ...Y....
750:  06 FA 0A 26 F7 2E 34 00  8B D8 8E C1 26 C7 87 22   ...&..4. ....&.."
760:  04 01 00 B8 1A 00 8E 06  FA 0A 26 F7 2E 34 00 8B   ........ ..&..4..
770:  D8 8E C1 B8 1A 00 F7 6E  08 8E 06 FE 0A 8E C1 8C   .......n ........
780:  C2 8E C2 50 8D 87 26 04  89 46 F8 8C 46 FA 58 8C   ...P..&. .F..F.X.
790:  C2 8E 06 FE 0A 26 8B 1E  58 08 26 8B 36 5A 08 03   .....&.. X.&.6Z..
7A0:  D8 51 06 1E 56 8B F3 1F  C4 7E F8 B9 0D 00 F3 A5   .Q..V... .~......
7B0:  1F 07 59 B8 1A 00 8E 06  FA 0A 26 F7 2E 34 00 8B   ..Y..... ..&..4..
7C0:  D8 8E C1 26 C7 87 3C 04  01 00 B8 1A 00 F7 6E 06   ...&..<. ......n.
7D0:  8B D8 8E 06 FE 0A 26 C4  36 58 08 8B 46 08 26 39   ......&. 6X..F.&9
7E0:  40 10 74 03 E9 4D 00 B8  1A 00 8E 06 FA 0A 26 F7   @.t..M.. ......&.
7F0:  2E 34 00 8B D8 8E C1 B8  1A 00 F7 6E 06 8E 06 FE   .4...... ...n....
800:  0A 8E 06 F8 0A 8C C1 8E  C1 50 8D 87 10 04 89 46   ........ .P.....F
810:  F4 8C 46 F6 58 8E 06 FE  0A 26 8B 0E 58 08 26 8B   ..F.X... .&..X.&.
820:  16 5A 08 03 C8 83 C1 10  1E 8B F1 8E DA C4 7E F4   .Z...... ......~.
830:  A5 A5 A5 1F B8 AA 14 8B  C8 B8 1A 00 8E 06 FA 0A   ........ ........
840:  26 F7 2E 34 00 8B D8 8E  06 F8 0A 51 06 1E 8D BF   &..4.... ...Q....
850:  1C 04 BE 2E 00 8E D9 A5  A5 A5 1F 07 59 B8 1A 00   ........ ....Y...
860:  8E 06 FA 0A 26 F7 2E 34  00 8B D8 8E 06 F8 0A 51   ....&..4 .......Q
870:  06 1E 8D BF 16 04 BE 2E  00 8E D9 A5 A5 A5 1F 07   ........ ........
880:  59 8E 06 FA 0A 26 A1 34  00 40 8B D0 B8 1A 00 8B   Y....&.4 .@......
890:  DA 26 F7 2E 34 00 8B F0  8E 06 F8 0A 26 89 9C 10   .&..4... ....&...
8A0:  04 B8 1A 00 8E 06 FA 0A  26 F7 2E 34 00 8B D8 8E   ........ &..4....
8B0:  06 F8 0A 51 06 1E 8D BF  36 04 BE 2E 00 8E D9 A5   ...Q.... 6.......
8C0:  A5 A5 1F 07 59 B8 1A 00  8E 06 FA 0A 26 F7 2E 34   ....Y... ....&..4
8D0:  00 8B D8 8E 06 F8 0A 06  1E 8D BF 2A 04 BE 2E 00   ........ ...*....
8E0:  8E D9 A5 A5 A5 1F 07 8E  06 FA 0A 26 A1 34 00 8B   ........ ...&.4..
8F0:  C8 B8 1A 00 26 F7 2E 34  00 8B D8 8E 06 F8 0A 26   ....&..4 .......&
900:  89 8F 30 04 B8 1A 00 8E  06 FA 0A 26 F7 2E 34 00   ..0..... ...&..4.
910:  8B D8 8E 06 F8 0A 26 83  A7 3E 04 F7 B8 1A 00 8E   ......&. .>......
920:  06 FA 0A 26 F7 2E 34 00  8B D8 8E 06 F8 0A 26 83   ...&..4. ......&.
930:  A7 24 04 F7 B8 1A 00 8E  06 FA 0A 26 F7 2E 34 00   .$...... ...&..4.
940:  8B D8 8E 06 F8 0A 26 83  8F 3E 04 60 B8 1A 00 8E   ......&. .>.`....
950:  06 FA 0A 26 F7 2E 34 00  8B D8 8E 06 F8 0A 26 83   ...&..4. ......&.
960:  8F 24 04 60 8E 06 FA 0A  26 A1 34 00 40 50 26 FF   .$.`.... &.4.@P&.
970:  36 34 00 FF 76 08 FF 76  06 9A 08 09 25 00 83 C4   64..v..v ....%...
980:  08 8E 06 FA 0A 26 A1 34  00 8E 06 F8 0A 26 8B 1E   .....&.4 .....&..
990:  00 00 D1 E3 26 89 87 24  00 26 FF 06 00 00 26 8B   ....&..$ .&....&.
9A0:  1E 00 00 D1 E3 26 C7 87  24 00 FF FF 8E 06 FA 0A   .....&.. $.......
```

B_ENROLL.DMP Tuesday, July 13, 1993 1:12 pm Page 4

```
9B0:  26 83 06 34 00 02 26 A1  34 00 8E 06 F8 0A 26 A3   &..4..&. 4.....&.
9C0:  02 00 5E 5F 8B E5 5D CB  55 8B EC 81 EC 00 00 57   ..^_..]. U......W
9D0:  56 8E 06 F4 0A 26 C7 06  54 EB 00 00 9A 04 00 5F   V....&.. T......_
9E0:  03 3D 00 00 74 03 E9 06  00 B8 FF FF E9 31 00 B8   .=..t... .....1..
9F0:  EA E9 B9 AA 14 51 50 B8  00 00 B9 62 23 51 50 9A   .....QP. ...b#QP.
A00:  BB 16 5F 03 83 C4 08 B8  01 00 50 9A 20 0B AA 08   .._..... ..P. ...
A10:  83 C4 02 9A C9 02 0A 06  9A 4C 03 0A 06 E9 00 00   ........ .L......
A20:  5E 5F 8B E5 5D CB 55 8B  EC 81 EC 08 00 57 56 8E   ^_..].U. .....WV.
A30:  06 00 0B 26 81 3E 70 08  DC 05 7C 03 E9 0C 00 26   ...&.>p. ..|....&
A40:  81 3E 6E 08 00 01 7D 03  E9 06 00 B8 FF FF E9 01   .>n...}. ........
A50:  03 8E 06 00 0B 26 A1 70  08 26 FF 06 70 08 89 46   .....&.p .&..p..F
A60:  FE 8B 46 FE 26 8B 1E 6E  08 D1 E3 26 89 87 92 08   ..F.&..n ...&....
A70:  26 FF 06 6E 08 B8 1A 00  F7 6E 06 05 0C 04 B9 62   &..n.... .n.....b
A80:  23 8B D0 B8 1A 00 8B DA  F7 6E FE 8B F0 51 06 1E   #....... .n...Q..
A90:  8D BC 7A 0C 8B F3 8E D9  B9 0D 00 F3 A5 1F 07 59   ..z..... .......Y
AA0:  B8 AA 14 8B D0 B8 1A 00  8B DA F7 6E FE 8B F0 51   ........ ...n...Q
AB0:  06 1E 8D BC 8A 0C BE 2E  00 8E DB A5 A5 A5 1F 07   ........ ........
AC0:  59 B8 1A 00 F7 6E FE 05  8A 0C 89 46 F8 8C 46 FA   Y....n.. ...F..F.
AD0:  8B 46 F8 8B 56 FA 8B D8  B8 1A 00 8B F2 F7 6E FE   .F..V... ......n.
AE0:  8B F8 51 06 1E 56 8D BD  84 0C 8B F3 1F A5 A5 A5   ..Q..V.. ........
AF0:  1F 07 59 B8 1A 00 F7 6E  06 8B D8 8E C1 8B 46 08   ..Y....n ......F.
B00:  26 39 87 1C 04 74 03 E9  26 00 B8 1A 00 F7 6E 06   &9...t.. &.....n.
B10:  05 1C 04 8B D0 B8 1A 00  8B DA F7 6E FE 8B F0 8E   ........ ...n....
B20:  06 00 0B 1E 8D BC 7E 0C  8B F3 8E D9 A5 A5 A5 1F   ........ ........
B30:  B8 1A 00 F7 6E FE 8B D8  8E 06 00 0B 26 C7 87 90   ....n... ....&...
B40:  0C 01 00 B8 1A 00 F7 6E  FE 8B D8 26 83 8F 92 0C   .......n ...&....
B50:  06 26 A1 70 08 26 FF 06  70 08 89 46 FC B8 1A 00   .&.p.&.. p..F....
B60:  F7 6E 08 05 0C 04 B9 62  23 8B D0 B8 1A 00 8B DA   .n.....b #.......
B70:  F7 6E FC 8B F0 06 1E 8D  BC 7A 0C 8B F3 8E D9 B9   .n...... .z......
B80:  0D 00 F3 A5 1F 07 B8 AA  14 8B C8 B8 1A 00 F7 6E   ........ .......n
B90:  FC 8B D8 06 1E 8D BF 8A  0C BE 2E 00 8E D9 A5 A5   ........ ........
BA0:  A5 1F 07 B8 1A 00 F7 6E  FC 05 8A 0C 89 46 F8 8C   .......n .....F..
BB0:  46 FA 8B 46 F8 8B 56 FA  8B C8 B8 1A 00 8B DA F7   F..F..V. ........
BC0:  6E FC 8B F0 06 1E 8D BC  7E 0C 8B F1 8E DB A5 A5   n....... ........
BD0:  A5 1F 07 B8 1A 00 F7 6E  FE 8B D8 8B 46 FC 26 89   .......n ....F.&.
BE0:  87 7E 0C B8 1A 00 F7 6E  FC 8B D8 8B 46 FE 26 89   .......n ....F.&.
BF0:  87 84 0C B8 1A 00 F7 6E  FE 8B D8 26 81 BF 80 0C   .......n ...&....
C00:  68 01 7F 03 E9 0F 00 B8  1A 00 F7 6E FE 8B D8 26   h....... ...n...&
C10:  81 AF 80 0C 68 01 B8 1A  00 F7 6E FE 8B D8 8E 06   ....h... ..n.....
C20:  00 0B 26 83 BF 80 0C 00  7C 03 E9 0F 00 B8 1A 00   ..&..... |.......
C30:  F7 6E FE 8B D8 26 81 87  80 0C 68 01 B8 1A 00 F7   .n...&.. ..h.....
C40:  6E FC 8B D8 8E 06 00 0B  26 81 BF 86 0C 68 01 7F   n....... &....h..
C50:  03 E9 0F 00 B8 1A 00 F7  6E FE 8B D8 26 81 AF 86   ........ n...&...
C60:  0C 68 01 B8 1A 00 F7 6E  FC 8B D8 8E 06 00 0B 26   .h.....n .......&
C70:  83 BF 86 0C 00 7C 03 E9  0F 00 B8 1A 00 F7 6E FE   .....|.. ......n.
C80:  8B D8 26 81 87 86 0C 68  01 B8 1A 00 F7 6E FC 8B   ..&....h .....n..
C90:  D8 8E 06 00 0B 26 C7 87  90 0C 01 00 B8 1A 00 F7   .....&.. ........
CA0:  6E FC 8B D8 26 83 8F 92  0C 06 B8 1A 00 F7 6E FC   n...&... ......n.
CB0:  8B D8 26 83 A7 92 0C F7  B8 1A 00 F7 6E FE 8B D8   ..&..... ....n...
CC0:  26 83 A7 92 0C F7 B8 1A  00 F7 6E FE 8B D8 B8 1A   &....... ..n.....
CD0:  00 F7 6E 06 8B F0 8E 06  F8 0A 26 8A 84 24 04 8E   ..n..... ..&..$..
CE0:  06 00 0B 26 32 87 92 0C  25 60 00 8B C8 B8 1A 00   ...&2... %`......
CF0:  F7 6E FE 8B D8 26 31 8F  92 0C B8 1A 00 F7 6E 08   .n...&1. ......n.
```

```
D00:  8B D8 8E 06 F8 0A B8 1A  00 F7 6E FC 8B F0 8E 06   ........ ..n.....
D10:  00 0B 26 8A 84 92 0C 8E  06 F8 0A 26 32 87 24 04   ..&..... ...&2.$.
D20:  25 60 00 8B C8 B8 1A 00  F7 6E FC 8B D8 8E 06 00   %`...... .n......
D30:  0B 26 31 8F 92 0C FF 76  FE FF 76 06 9A FC 19 25   .&1....v ..v....%
D40:  00 83 C4 04 FF 76 FC FF  76 08 9A FC 19 25 00 83   .....v.. v....%..
D50:  C4 04 5E 5F 8B E5 5D CB  55 8B EC 81 EC 08 00 57   ..^_..]. U......W
D60:  56 B8 1A 00 F7 6E 08 8B  D8 8E 06 FE 0A 26 C4 36   V....n.. .....&.6
D70:  58 08 26 F6 40 18 08 75  03 E9 86 00 B8 1A 00 F7   X.&.@..u ........
D80:  6E 08 8B D8 8E 06 FE 0A  26 C4 36 58 08 26 8B 40   n....... &.6X.&.@
D90:  04 89 46 F8 B8 1A 00 F7  6E 08 8B D8 8E 06 FE 0A   ..F..... n.......
DA0:  26 C4 36 58 08 26 8B 40  10 89 46 FE B8 1A 00 F7   &.6X.&.@ ..F.....
DB0:  6E F8 8B D8 8E 06 FE 0A  26 C4 36 58 08 8B 46 0C   n....... &.6X..F.
DC0:  26 89 40 16 B8 1A 00 F7  6E FE 8B D8 8E 06 FE 0A   &.@..... n.......
DD0:  26 C4 36 58 08 8B 46 0C  26 89 40 16 B8 1A 00 F7   &.6X..F. &.@.....
DE0:  6E 0C 8B D8 8E 06 F8 0A  26 8B 87 24 04 25 BF FF   n....... &..$.%..
DF0:  0D 20 00 8B C8 B8 1A 00  F7 6E 0C 8B D8 26 89 8F   . ...... .n...&..
E00:  24 04 B8 1A 00 F7 6E 06  8B D8 8E 06 FE 0A 26 C4   $.....n. ......&.
E10:  36 58 08 26 F6 40 18 08  75 03 E9 C5 00 B8 1A 00   6X.&.@.. u.......
E20:  F7 6E 08 8B D8 8E 06 FE  0A 26 C4 36 58 08 26 8B   .n...... .&.6X.&.
E30:  40 16 89 46 FC B8 1A 00  F7 6E FC 8B D8 8E 06 F8   @..F.... .n......
E40:  0A 26 83 BF 20 04 FF 74  03 E9 09 00 8B 46 FC 89   .&.. ..t .....F..
E50:  46 FA E9 14 00 B8 1A 00  F7 6E FC 8B D8 8E 06 F8   F....... .n......
E60:  0A 26 8B 87 20 04 89 46  FA B8 1A 00 F7 6E FA 8B   .&.. ..F .....n..
E70:  D8 8E 06 F8 0A 8B 46 0A  26 89 87 20 04 B8 1A 00   ......F. &.. ....
E80:  F7 6E 0A 8B D8 8B 46 FC  26 89 87 20 04 B8 00 00   .n....F. &.. ....
E90:  50 FF 76 FC B8 0C 04 06  50 9A DF 27 25 00 83 C4   P.v..... P..'%...
EA0:  08 40 74 03 E9 15 00 B8  1A 00 F7 6E 0A 8B D8 8E   .@t..... ...n....
EB0:  06 F8 0A 26 83 A7 24 04  9F E9 26 00 B8 1A 00 F7   ...&..$. ..&.....
EC0:  6E 0A 8B D8 8E 06 F8 0A  26 8B 87 24 04 25 DF FF   n....... &..$.%..
ED0:  0D 40 00 8B C8 B8 1A 00  F7 6E 0A 8B D8 26 89 8F   .@...... .n...&..
EE0:  24 04 5E 5F 8B E5 5D CB  55 8B EC 81 EC 04 00 57   $.^_..]. U......W
EF0:  56 8B 46 06 89 46 FE 8B  46 08 89 46 FC 8B 46 FC   V.F..F.. F..F..F.
F00:  E9 00 00 5E 5F 8B E5 5D  CB 55 8B EC 81 EC 0C 00   ...^_..] .U......
F10:  57 56 8E 06 00 0B 26 A1  6E 08 05 64 00 8E 06 02   WV....&. n..d....
F20:  0B 26 A3 2C 00 B8 02 00  50 26 FF 36 2C 00 9A 4E   .&.,.... P&.6,..N
F30:  29 AF 0D 83 C4 04 8E 06  04 0B 26 A3 DA DF 26 89   )....... ..&...&.
F40:  16 DC DF 26 A1 DC DF 26  0B 06 DA DF 74 03 E9 06   ...&...& ....t...
F50:  00 B8 FF FF E9 7C 01 B8  1A 00 50 8E 06 00 0B 26   .....|.. ..P....&
F60:  FF 36 70 08 9A 4E 29 AF  0D 83 C4 04 8E 06 06 0B   .6p..N). ........
F70:  26 A3 7C C9 26 89 16 7E  C9 26 A1 7E C9 26 0B 06   &.|.&..~ .&.~.&..
F80:  7C C9 74 03 E9 06 00 B8  FF FF E9 46 01 C7 46 F8   |.t..... ...F..F.
F90:  00 00 E9 03 00 FF 46 F8  8E 06 00 0B 8B 46 F8 26   ......F. .....F.&
FA0:  39 06 6E 08 7F 03 E9 1E  00 8B 5E F8 D1 E3 26 8B   9.n..... ..^...&.
FB0:  87 92 08 8E 06 04 0B 26  C4 1E DA DF 8B 76 F8 D1   .......& .....v..
FC0:  E6 26 89 00 E9 CE FF C7  46 FC 00 00 E9 03 00 FF   .&...... F.......
FD0:  46 FC 8E 06 00 0B 8B 46  FC 26 39 06 70 08 7F 03   F......F .&9.p...
FE0:  E9 2F 00 B8 1A 00 F7 6E  FC 8E 06 06 0B 8B C8 B8   ./.....n ........
FF0:  1A 00 F7 6E FC 05 7A 0C  BA AA 14 26 C4 1E 7C C9   ...n..z. ...&..|.
1000: 8B F1 1E 8D 38 8B F0 8E  DA B9 0D 00 F3 A5 1F E9   ....8... ........
1010: BD FF 8E 06 00 0B 26 A1  6E 08 89 46 F4 89 46 FE   ......&. n..F..F.
1020: 26 A1 70 08 89 46 F6 C7  46 F8 00 00 E9 03 00 FF   &.p..F.. F.......
1030: 46 F8 8B 46 F8 39 46 F4  7F 03 E9 72 00 8E 06 04   F..F.9F. ...r....
1040: 0B 26 C4 1E DA DF 8B 76  F8 D1 E6 26 8B 00 89 46   .&.....v ...&...F
```

```
1050:  FC B8 1A 00 F7 6E FC 8B  D8 8E 06 06 0B 26 C4 36   .....n.. .....&.6
1060:  7C C9 26 8B 40 04 89 46  FA B8 1A 00 F7 6E FC 8B   |.&.@..F .....n..
1070:  D8 8E 06 06 0B 26 C4 36  7C C9 26 83 78 16 01 7E   .....&.6 |.&.x..~
1080:  03 E9 28 00 8E 06 04 0B  26 C4 1E DA DF 8B 76 F8   ..(..... &.....v.
1090:  D1 E6 26 C7 00 FF FF FF  4E FE 83 6E F6 02 FF 76   ..&..... N..n...v
10A0:  FA FF 76 FC 9A 89 0C 25  00 83 C4 04 E9 80 FF 8D   ..v....% ........
10B0:  46 F4 16 50 9A 4F 10 25  00 83 C4 04 40 74 03 E9   F..P.O.% ....@t..
10C0:  06 00 B8 FF FF E9 0B 00  9A C9 02 0A 06 B8 00 00   ........ ........
10D0:  E9 00 00 5E 5F 8B E5 5D  CB 55 8B EC 81 EC 06 00   ...^_..] .U......
10E0:  57 56 C7 46 FA 00 00 B8  1A 00 F7 6E 06 8B D8 8E   WV.F.... ...n....
10F0:  06 06 0B 26 C4 36 7C C9  26 8B 40 14 89 46 FC 40   ...&.6|. &.@..F.@
1100:  75 03 E9 14 01 8B 46 06  39 46 FC 75 03 E9 24 00   u.....F. 9F.u..$.
1110:  8B 46 FC 89 46 FE FF 46  FA B8 1A 00 F7 6E FC 8B   .F..F..F .....n..
1120:  D8 8E 06 06 0B 26 C4 36  7C C9 26 8B 40 14 89 46   .....&.6 |.&.@..F
1130:  FC E9 D1 FF 83 7E FA 01  7F 03 E9 AF 00 B8 1A 00   .....~.. ........
1140:  F7 6E 06 8B D8 8E 06 06  0B 26 C4 36 7C C9 26 8B   .n...... .&.6|.&.
1150:  40 14 8B C8 B8 1A 00 F7  6E FE 8B D8 8E 06 06 0B   @....... n.......
1160:  26 C4 36 7C C9 26 89 48  14 B8 01 00 50 FF 76 FE   &.6|.&.H ....P.v.
1170:  8E 06 06 0B 26 FF 36 7E  C9 26 FF 36 7C C9 9A DF   ....&.6~ .&.6|...
1180:  27 25 00 83 C4 08 40 74  03 E9 5D 00 B8 1A 00 F7   '%....@t ..].....
1190:  6E FE 8B D8 8E 06 06 0B  26 C4 36 7C C9 26 8A 40   n....... &.6|.&.@
11A0:  18 24 60 3C 60 75 03 E9  3F 00 B8 1A 00 F7 6E FE   .$`<`u.. ?.....n.
11B0:  8B D8 8E 06 06 0B 26 C4  36 7C C9 26 8A 40 18 24   ......&. 6|.&.@.$
11C0:  60 3C 20 75 03 E9 21 00  B8 01 00 50 B8 FF FF 50   `< u..!. ...P...P
11D0:  FF 76 FE 8E 06 06 0B 26  FF 36 7E C9 26 FF 36 7C   .v.....& .6~.&.6|
11E0:  C9 9A 4A 22 25 00 83 C4  0A E9 2D 00 B8 1A 00 F7   ..J"%... ..-.....
11F0:  6E FE 8B D8 8E 06 06 0B  26 C4 36 7C C9 26 C7 40   n....... &.6|.&.@
1200:  14 FF FF B8 1A 00 F7 6E  FE 8B D8 8E 06 06 0B 26   .......n .......&
1210:  C4 36 7C C9 26 83 48 18  60 B8 1A 00 F7 6E 08 8B   .6|.&.H. `....n..
1220:  D8 8E 06 06 0B 26 C4 36  7C C9 26 8B 40 14 89 46   .....&.6 |.&.@..F
1230:  FC 40 75 03 E9 19 01 C7  46 FA 00 00 8B 46 08 39   .@u..... F....F.9
1240:  46 FC 75 03 E9 24 00 8B  46 FC 89 46 FE FF 46 FA   F.u..$.. F..F..F.
1250:  B8 1A 00 F7 6E FC 8B D8  8E 06 06 0B 26 C4 36 7C   ....n... ....&.6|
1260:  C9 26 8B 40 14 89 46 FC  E9 D1 FF 83 7E FA 01 7F   .&.@..F. ....~...
1270:  03 E9 AF 00 B8 1A 00 F7  6E 08 8B D8 8E 06 06 0B   ........ n.......
1280:  26 C4 36 7C C9 26 8B 40  14 8B C8 B8 1A 00 F7 6E   &.6|.&.@ .......n
1290:  FE 8B D8 8E 06 06 0B 26  C4 36 7C C9 26 89 48 14   .......& .6|.&.H.
12A0:  B8 01 00 50 FF 76 FE 8E  06 06 0B 26 FF 36 7E C9   ...P.v.. ...&.6~.
12B0:  26 FF 36 7C C9 9A DF 27  25 00 83 C4 08 40 74 03   &.6|...' %....@t.
12C0:  E9 5D 00 B8 1A 00 F7 6E  FE 8B D8 8E 06 06 0B 26   .].....n .......&
12D0:  C4 36 7C C9 26 8A 40 18  24 60 3C 60 75 03 E9 3F   .6|.&.@. $`<`u..?
12E0:  00 B8 1A 00 F7 6E FE 8B  D8 8E 06 06 0B 26 C4 36   .....n.. .....&.6
12F0:  7C C9 26 8A 40 18 24 60  3C 20 75 03 E9 21 00 B8   |.&.@.$` < u..!..
1300:  01 00 50 B8 FF FF 50 FF  76 FE 8E 06 06 0B 26 FF   ..P...P. v.....&.
1310:  36 7E C9 26 FF 36 7C C9  9A 4A 22 25 00 83 C4 0A   6~.&.6|. .J"%....
1320:  E9 2D 00 B8 1A 00 F7 6E  FE 8B D8 8E 06 06 0B 26   .-.....n .......&
1330:  C4 36 7C C9 26 C7 40 14  FF FF B8 1A 00 F7 6E FE   .6|.&.@. ......n.
1340:  8B D8 8E 06 06 0B 26 C4  36 7C C9 26 83 48 18 60   ......&. 6|.&.H.`
1350:  B8 00 00 E9 00 00 5E 5F  8B E5 5D CB 55 8B EC 81   ......^_ ..].U...
1360:  EC 0C 00 57 56 B8 00 00  89 46 F6 89 46 F4 C7 46   ...WV... .F..F..F
1370:  F8 01 00 8B 46 06 89 46  FA B8 1A 00 F7 6E FA 8B   ....F..F .....n..
1380:  F0 8E 06 06 0B 26 C4 1E  7C C9 26 8B 00 01 46 F6   .....&.. |.&...F.
1390:  B8 1A 00 F7 6E FA 8B D8  8E 06 06 0B 26 C4 36 7C   ....n... ....&.6|
```

B_ENROLL.DMP Tuesday, July 13, 1993 1:12 pm Page 7

```
13A0:  C9 26 8B 40 02 01 46 F4  FF 46 F8 B8 1A 00 F7 6E   .&.@..F. .F.....n
13B0:  FA 8B D8 8E 06 06 0B 26  C4 36 7C C9 26 8B 40 14   .......& .6|.&.@.
13C0:  89 46 FA 83 7E FA FF 74  03 E9 06 00 B8 FF FF E9   .F..~..t ........
13D0:  C7 00 8B 46 06 39 46 FA  74 03 E9 03 00 E9 03 00   ...F.9F. t.......
13E0:  E9 96 FF 8B 46 F6 99 F7  7E F8 89 46 FE 8B 46 F4   ....F... ~..F..F.
13F0:  99 F7 7E F8 89 46 FC B8  1A 00 F7 6E 06 8B D8 8E   ..~..F.. ...n....
1400:  06 06 0B 26 C4 36 7C C9  26 8B 40 14 89 46 FA B8   ...&.6|. &.@..F..
1410:  1A 00 F7 6E 06 8B F0 8E  06 06 0B 26 C4 1E 7C C9   ...n.... ...&..|.
1420:  8B 46 FE 26 89 00 B8 1A  00 F7 6E 06 8B D8 8E 06   .F.&.... ..n.....
1430:  06 0B 26 C4 36 7C C9 8B  46 FC 26 89 40 02 8B 46   ..&.6|.. F.&.@..F
1440:  06 39 46 FA 75 03 E9 4A  00 B8 1A 00 F7 6E FA 8B   .9F.u..J .....n..
1450:  F0 8E 06 06 0B 26 C4 1E  7C C9 8B 46 FE 26 89 00   .....&.. |..F.&..
1460:  B8 1A 00 F7 6E FA 8B D8  8E 06 06 0B 26 C4 36 7C   ....n... ....&.6|
1470:  C9 8B 46 FC 26 89 40 02  B8 1A 00 F7 6E FA 8B D8   ..F.&.@. ....n...
1480:  8E 06 06 0B 26 C4 36 7C  C9 26 8B 40 14 89 46 FA   ....&.6| .&.@..F.
1490:  E9 AB FF B8 00 00 E9 00  00 5E 5F 8B E5 5D CB 55   ........ .^_..].U
14A0:  8B EC 81 EC 1C 00 57 56  8E 06 00 0B 26 C7 06 70   ......WV ....&..p
14B0:  08 00 00 26 C7 06 6E 08  00 00 C7 46 F4 00 00 E9   ...&..n. ...F....
14C0:  03 00 FF 46 F4 C4 5E 06  8B 46 F4 26 39 07 7F 03   ...F..^. .F.&9...
14D0:  E9 9F 03 8E 06 04 0B 26  C4 1E DA DF 8B 76 F4 D1   .......& .....v..
14E0:  E6 26 8B 00 89 46 F8 83  7E F8 FF 74 03 E9 03 00   .&...F.. ~..t....
14F0:  E9 CF FF B8 1A 00 F7 6E  F8 8B F0 8E 06 06 0B 26   .......n .......&
1500:  C4 1E 7C C9 26 83 38 00  7C 03 E9 03 00 E9 B2 FF   ..|.&.8. |.......
1510:  FF 76 F8 8E 06 06 0B 26  FF 36 7E C9 26 FF 36 7C   .v.....& .6~.&.6|
1520:  C9 9A CD 24 25 00 83 C4  06 89 46 F6 B8 1A 00 F7   ...$%... ..F.....
1530:  6E F8 8B D8 8E 06 06 0B  26 C4 36 7C C9 26 8A 40   n....... &.6|.&.@
1540:  18 24 60 3C 20 74 03 E9  56 01 8B 46 F8 89 46 FE   .$`< t.. V..F..F.
1550:  8B 46 F6 89 46 F8 8B 46  FE 89 46 F6 B8 1A 00 F7   .F..F..F ..F.....
1560:  6E F8 8B D8 8E 06 06 0B  26 C4 36 7C C9 B8 1A 00   n....... &.6|....
1570:  F7 6E F8 8C C1 8E C1 50  8D 40 04 89 46 E8 8C 46   .n.....P .@..F..F
1580:  EA 58 8E 06 06 0B 26 8B  0E 7C C9 26 8B 16 7E C9   .X....&. .|.&..~.
1590:  03 C8 83 C1 0A 06 1E 8B  F1 8E DA C4 7E E8 A5 A5   ........ ....~...
15A0:  A5 1F 07 B8 1A 00 F7 6E  F8 8B D8 26 C4 36 7C C9   .......n ...&.6|.
15B0:  B8 AA 14 1E 8D 78 10 BE  2E 00 8E D8 A5 A5 A5 1F   .....x.. ........
15C0:  B8 1A 00 F7 6E F8 8E 06  06 0B 26 8B 0E 7C C9 26   ....n... ..&..|.&
15D0:  8B 16 7E C9 03 C8 83 C1  10 89 4E F0 89 56 F2 B8   ..~..... ..N..V..
15E0:  1A 00 F7 6E F8 8B D8 26  C4 36 7C C9 8B 46 F0 8B   ...n...& .6|..F..
15F0:  56 F2 1E 8D 78 0A 8B F0  8E DA A5 A5 A5 1F B8 1A   V...x... ........
1600:  00 F7 6E F6 8B D8 8E 06  06 0B 26 C4 36 7C C9 B8   ..n..... ..&.6|..
1610:  1A 00 F7 6E F6 8C C1 8E  C1 50 8D 40 0A 89 46 E4   ...n.... .P.@..F.
1620:  8C 46 E6 58 8E 06 06 0B  26 8B 0E 7C C9 26 8B 16   .F.X.... &..|.&..
1630:  7E C9 03 C8 83 C1 04 06  1E 8B F1 8E DA C4 7E E4   ~....... ......~.
1640:  A5 A5 A5 1F 07 B8 1A 00  F7 6E F6 8B D8 26 C4 36   ........ .n...&.6
1650:  7C C9 B8 AA 14 1E 8D 78  10 BE 2E 00 8E D8 A5 A5   |......x ........
1660:  A5 1F B8 1A 00 F7 6E F6  8E 06 06 0B 26 8B 0E 7C   ......n. ....&..|
1670:  C9 26 8B 16 7E C9 03 C8  83 C1 10 89 4E EC 89 56   .&..~... ....N..V
1680:  EE B8 1A 00 F7 6E F6 8B  D8 26 C4 36 7C C9 8B 46   .....n.. .&.6|..F
1690:  EC 8B 56 EE 1E 8D 78 04  8B F0 8E DA A5 A5 A5 1F   ..V...x. ........
16A0:  B8 1A 00 F7 6E F8 8B D8  8E 06 06 0B 26 C4 36 7C   ....n... ....&.6|
16B0:  C9 26 8A 40 18 24 60 3C  60 74 03 E9 B1 01 B8 1A   .&.@.$`< `t......
16C0:  00 F7 6E F6 8B D8 8E 06  06 0B 26 C4 36 7C C9 26   ..n..... ..&.6|.&
16D0:  8A 40 18 24 60 3C 60 75  03 E9 1E 00 B8 1A 00 F7   .@.$`<`u ........
16E0:  6E F6 8B D8 8E 06 06 0B  26 C4 36 7C C9 26 8A 40   n....... &.6|.&.@
```

```
16F0:  18 24 60 3C 20 74 03 E9  75 01 8E 06 00 0B 26 A1   .$`< t.. u.....&.
1700:  70 08 26 FF 06 70 08 89  46 FC 26 A1 70 08 26 FF   p.&..p.. F.&.p.&.
1710:  06 70 08 89 46 FA B8 1A  00 F7 6E FC 8B D8 B8 1A   .p..F... ..n.....
1720:  00 F7 6E F8 8E 06 06 0B  8E 06 00 0B 8C C1 8E C1   ..n..... ........
1730:  8C C2 8E C2 50 8D 87 7A  0C 89 46 E4 8C 46 E6 58   ....P..z ..F..F.X
1740:  8C C2 8E 06 06 0B 26 8B  1E 7C C9 26 8B 36 7E C9   ......&. .|.&.6~.
1750:  03 D8 51 06 1E 56 8B F3  1F C4 7E E4 B9 0D 00 F3   ..Q..V.. ..~.....
1760:  A5 1F 07 59 8E C1 26 A1  6E 08 8B D8 B8 1A 00 F7   ...Y..&. n.......
1770:  6E FC 8B F0 26 89 9C 90  0C B8 1A 00 F7 6E FC 8B   n...&... .....n..
1780:  D8 8B 46 FA 26 89 87 7E  0C B8 1A 00 F7 6E FA 8B   ..F.&..~ .....n..
1790:  D8 B8 1A 00 F7 6E F6 8E  06 06 0B 8E C1 8C C2 8E   .....n.. ........
17A0:  C2 50 8D 87 7A 0C 89 46  E8 8C 46 EA 58 8C C2 8E   .P..z..F ..F.X...
17B0:  06 06 0B 26 8B 1E 7C C9  26 8B 36 7E C9 03 D8 51   ...&..|. &.6~...Q
17C0:  06 1E 56 8B F3 1F C4 7E  E8 B9 0D 00 F3 A5 1F 07   ..V....~ ........
17D0:  59 8E C1 26 A1 6E 08 8B  D8 B8 1A 00 F7 6E FA 8B   Y..&.n.. .....n..
17E0:  F0 26 89 9C 90 0C B8 1A  00 F7 6E FA 8B D8 8B 46   .&...... ..n....F
17F0:  FC 26 89 87 84 0C 8B 46  FC 26 8B 1E 6E 08 D1 E3   .&.....F .&..n...
1800:  26 89 87 92 08 B8 1A 00  F7 6E F6 8B D8 8E 06 06   &....... .n......
1810:  0B 26 C4 36 7C C9 26 83  78 14 FF 75 03 E9 1A 00   .&.6|.&. x..u....
1820:  FF 76 08 FF 76 06 FF 76  F6 FF 76 FA 9A 92 14 25   .v..v..v ..v....%
1830:  00 83 C4 08 40 74 03 E9  00 00 B8 1A 00 F7 6E F8   ....@t.. ......n.
1840:  8B F0 8E 06 06 0B 26 C4  1E 7C C9 26 C7 00 FF FF   ......&. .|.&....
1850:  B8 1A 00 F7 6E F6 8B F0  8E 06 06 0B 26 C4 1E 7C   ....n... ....&..|
1860:  C9 26 C7 00 FF FF 8E 06  00 0B 26 FF 06 6E 08 E9   .&...... ..&..n..
1870:  50 FC 8E 06 04 0B 26 A1  DC DF 26 0B 06 DA DF 75   P.....&. ..&....u
1880:  03 E9 12 00 26 FF 36 DC  DF 26 FF 36 DA DF 9A C4   ....&.6. .&.6....
1890:  22 AF 0D 83 C4 04 8E 06  04 0B 2B C0 26 A3 DC DF   "....... ..+.&...
18A0:  26 A3 DA DF 8E 06 06 0B  26 A1 7E C9 26 0B 06 7C   &....... &.~.&..|
18B0:  C9 75 03 E9 12 00 26 FF  36 7E C9 26 FF 36 7C C9   .u....&. 6~.&.6|.
18C0:  9A C4 22 AF 0D 83 C4 04  8E 06 06 0B 2B C0 26 A3   .."..... ....+.&.
18D0:  7E C9 26 A3 7C C9 B8 00  00 E9 00 00 5E 5F 8B E5   ~.&.|... ....^_..
18E0:  5D CB 55 8B EC 81 EC 14  00 57 56 FF 76 0C FF 76   ].U..... .WV.v..v
18F0:  0A FF 76 08 9A D9 2D 25  00 83 C4 06 40 74 03 E9   ..v...-% ....@t..
1900:  06 00 B8 FF FF E9 3E 05  FF 76 08 9A 0C 0F 25 00   ......>. .v....%.
1910:  83 C4 02 40 74 03 E9 06  00 B8 FF FF E9 27 05 B8   ...@t... .....'..
1920:  FF FF 89 46 F4 89 46 FC  B8 02 00 50 FF 76 08 8E   ...F..F. ...P.v..
1930:  06 06 0B 26 FF 36 7E C9  26 FF 36 7C C9 9A DF 27   ...&.6~. &.6|...'
1940:  25 00 83 C4 08 89 46 F6  83 7E F6 FF 75 03 E9 57   %.....F. .~..u..W
1950:  02 B8 1A 00 F7 6E 06 8B  D8 8E 06 00 0B 26 83 8F   .....n.. .....&..
1960:  92 0C 08 26 A1 70 08 26  FF 06 70 08 89 46 FC B8   ...&.p.& ..p..F..
1970:  1A 00 F7 6E 06 8B D8 8B  46 FC 26 89 87 8A 0C B8   ...n.... F.&.....
1980:  1A 00 F7 6E F6 8B D8 8E  06 06 0B 26 C4 36 7C C9   ...n.... ...&.6|.
1990:  26 8B 40 04 89 46 F8 83  7E F8 FF 75 03 E9 53 00   &.@..F.. ~..u..S.
19A0:  B8 1A 00 F7 6E F6 8B D8  8E 06 06 0B 26 C4 36 7C   ....n... ....&.6|
19B0:  C9 26 8B 40 08 8B C8 B8  1A 00 F7 6E 06 8B D8 8E   .&.@.... ...n....
19C0:  06 00 0B 26 89 8F 8E 0C  B8 1A 00 F7 6E F6 8B D8   ...&.... ....n...
19D0:  8E 06 06 0B 26 C4 36 7C  C9 26 8B 40 06 8B C8 B8   ....&.6| .&.@....
19E0:  1A 00 F7 6E 06 8B D8 8E  06 00 0B 26 89 8F 8C 0C   ...n.... ...&....
19F0:  E9 7A 00 B8 1A 00 F7 6E  F6 8B D8 8E 06 06 0B 26   .z.....n .......&
1A00:  C4 36 7C C9 26 8B 40 0A  89 46 F8 83 7E F8 FF 75   .6|.&.@. .F..~..u
1A10:  03 E9 53 00 B8 1A 00 F7  6E F6 8B D8 8E 06 06 0B   ..S..... n.......
1A20:  26 C4 36 7C C9 26 8B 40  0E 8B C8 B8 1A 00 F7 6E   &.6|.&.@ .......n
1A30:  06 8B D8 8E 06 00 0B 26  89 8F 8E 0C B8 1A 00 F7   .......& ........
```

```
1A40:  6E F6 8B D8 8E 06 06 0B  26 C4 36 7C C9 26 8B 40   n....... &.6|.&.@
1A50:  0C 8B C8 B8 1A 00 F7 6E  06 8B D8 8E 06 00 0B 26   .......n .......&
1A60:  89 8F 8C 0C E9 06 00 B8  FF FF E9 D9 03 B8 1A 00   ........ ........
1A70:  F7 6E FC 8B D8 8E 06 00  0B B8 1A 00 F7 6E F8 8E   .n...... .....n..
1A80:  06 06 0B 8E 06 00 0B 8C  C1 8E C1 8C C2 8E C2 50   ........ .......P
1A90:  8D 87 7A 0C 89 46 EC 8C  46 EE 58 8C C2 8E 06 06   ..z..F.. F.X.....
1AA0:  0B 26 8B 1E 7C C9 26 8B  36 7E C9 03 D8 51 06 1E   .&..|.&. 6~...Q..
1AB0:  56 8B F3 1F C4 7E EC B9  0D 00 F3 A5 1F 07 59 B8   V....~.. ......Y.
1AC0:  1A 00 F7 6E FC 8B D8 8E  C1 8B 46 06 26 89 87 84   ...n.... ..F.&...
1AD0:  0C B8 1A 00 F7 6E 06 8B  D8 26 8B 87 8E 0C 8B D0   .....n.. .&......
1AE0:  B8 1A 00 8B DA F7 6E FC  8B F0 26 89 9C 88 0C B8   ......n. ..&.....
1AF0:  AA 14 8B D0 B8 1A 00 8B  DA F7 6E FC 8B F0 51 06   ........ ..n...Q.
1B00:  1E 8D BC 8A 0C BE 2E 00  8E DB A5 A5 A5 1F 07 59   ........ .......Y
1B10:  B8 1A 00 F7 6E FC 05 8A  0C 89 46 F0 89 4E F2 8B   ....n... ..F..N..
1B20:  46 F0 8B 56 F2 8B D8 B8  1A 00 8B F2 F7 6E FC 8B   F..V.... .....n..
1B30:  F8 1E 56 8D BD 7E 0C 8B  F3 1F A5 A5 A5 1F B8 1A   ..V..~.. ........
1B40:  00 F7 6E F6 8B F0 8E 06  06 0B 26 C4 1E 7C C9 26   ..n..... ..&..|.&
1B50:  C7 00 FF FF B8 1A 00 F7  6E F8 8B D8 8E 06 06 0B   ........ n.......
1B60:  26 C4 36 7C C9 26 83 78  14 FF 75 03 E9 23 00 FF   &.6|.&.x ..u..#..
1B70:  76 0C FF 76 0A FF 76 F8  FF 76 FC 9A 92 14 25 00   v..v..v. .v....%.
1B80:  83 C4 08 40 74 03 E9 06  00 B8 FF FF E9 B7 02 E9   ...@t... ........
1B90:  16 00 B8 1A 00 F7 6E F8  8B F0 8E 06 06 0B 26 C4   ......n. ......&.
1BA0:  1E 7C C9 26 C7 00 FF FF  B8 00 00 50 FF 76 08 8E   .|.&.... ...P.v..
1BB0:  06 06 0B 26 FF 36 7E C9  26 FF 36 7C C9 9A DF 27   ...&.6~. &.6|...'
1BC0:  25 00 83 C4 08 89 46 FA  83 7E FA FF 75 03 E9 6F   %.....F. .~..u..o
1BD0:  02 B8 1A 00 F7 6E 06 8B  D8 8E 06 00 0B 26 83 8F   .....n.. .....&..
1BE0:  92 0C 08 26 A1 70 08 26  FF 06 70 08 89 46 F4 B8   ...&.p.& ..p..F..
1BF0:  1A 00 F7 6E FA 8B D8 8E  06 06 0B 26 C4 36 7C C9   ...n.... ...&.6|.
1C00:  26 8B 40 04 89 46 FE 83  7E FE FF 75 03 E9 67 00   &.@..F.. ~..u..g.
1C10:  B8 1A 00 F7 6E 06 8B D8  8E 06 00 0B 8B 46 F4 26   ...n.... .....F.&
1C20:  89 87 7E 0C B8 1A 00 F7  6E FA 8B D8 8E 06 06 0B   ..~..... n.......
1C30:  26 C4 36 7C C9 26 8B 40  08 8B C8 B8 1A 00 F7 6E   &.6|.&.@ .......n
1C40:  06 8B D8 8E 06 00 0B 26  89 8F 82 0C B8 1A 00 F7   .......& ........
1C50:  6E FA 8B D8 8E 06 06 0B  26 C4 36 7C C9 26 8B 40   n....... &.6|.&.@
1C60:  06 8B C8 B8 1A 00 F7 6E  06 8B D8 8E 06 00 0B 26   .......n .......&
1C70:  89 8F 80 0C E9 8E 00 B8  1A 00 F7 6E FA 8B D8 8E   ........ ...n....
1C80:  06 06 0B 26 C4 36 7C C9  26 8B 40 0A 89 46 FE 83   ...&.6|. &.@..F..
1C90:  7E FE FF 75 03 E9 67 00  B8 1A 00 F7 6E 06 8B D8   ~..u..g. ....n...
1CA0:  8E 06 00 0B 8B 46 F4 26  89 87 7E 0C B8 1A 00 F7   .....F.& ..~.....
1CB0:  6E FA 8B D8 8E 06 06 0B  26 C4 36 7C C9 26 8B 40   n....... &.6|.&.@
1CC0:  0E 8B C8 B8 1A 00 F7 6E  06 8B D8 8E 06 00 0B 26   .......n .......&
1CD0:  89 8F 82 0C B8 1A 00 F7  6E FA 8B D8 8E 06 06 0B   ........ n.......
1CE0:  26 C4 36 7C C9 26 8B 40  0C 8B C8 B8 1A 00 F7 6E   &.6|.&.@ .......n
1CF0:  06 8B D8 8E 06 00 0B 26  89 8F 80 0C E9 06 00 B8   .......& ........
1D00:  FF FF E9 41 01 B8 1A 00  F7 6E F4 8B D8 8E 06 00   ...A.... .n......
1D10:  0B B8 1A 00 F7 6E FE 8E  06 06 0B 8E 06 00 0B 8C   .....n.. ........
1D20:  C1 8E C1 8C C2 8E C2 50  8D 87 7A 0C 89 46 F0 8C   .......P ..z..F..
1D30:  46 F2 58 8C C2 8E 06 06  0B 26 8B 1E 7C C9 26 8B   F.X..... .&..|.&.
1D40:  36 7E C9 03 D8 51 06 1E  56 8B F3 1F C4 7E F0 B9   6~...Q.. V....~..
1D50:  0D 00 F3 A5 1F 07 59 B8  1A 00 F7 6E F4 8B D8 8E   ......Y. ...n....
1D60:  C1 8B 46 06 26 89 87 84  0C B8 1A 00 F7 6E 06 8B   ..F.&... .....n..
1D70:  D8 26 8B 87 82 0C 8B D0  B8 1A 00 8B DA F7 6E F4   .&...... ......n.
1D80:  8B F0 26 89 9C 88 0C B8  AA 14 8B D0 B8 1A 00 8B   ..&..... ........
```

B_ENROLL.DMP Tuesday, July 13, 1993 1:12 pm Page 10


```
1D90:  DA F7 6E F4 8B F0 51 06  1E 8D BC 8A 0C BE 2E 00   ..n...Q. ........
1DA0:  8E DB A5 A5 A5 1F 07 59  B8 1A 00 F7 6E F4 05 8A   .......Y ....n...
1DB0:  0C 89 46 EC 89 4E EE 8B  46 EC 8B 56 EE 8B D8 B8   ..F..N.. F..V....
1DC0:  1A 00 8B F2 F7 6E F4 8B  F8 1E 56 8D BD 7E 0C 8B   .....n.. ..V..~..
1DD0:  F3 1F A5 A5 A5 1F B8 1A  00 F7 6E FA 8B F0 8E 06   ........ ..n.....
1DE0:  06 0B 26 C4 1E 7C C9 26  C7 00 FF FF B8 1A 00 F7   ..&..|.& ........
1DF0:  6E FE 8B D8 8E 06 06 0B  26 C4 36 7C C9 26 83 78   n....... &.6|.&.x
1E00:  14 FF 75 03 E9 23 00 FF  76 0C FF 76 0A FF 76 FE   ..u..#.. v..v..v.
1E10:  FF 76 F4 9A 92 14 25 00  83 C4 08 40 74 03 E9 06   .v....%. ...@t...
1E20:  00 B8 FF FF E9 1F 00 E9  16 00 B8 1A 00 F7 6E FE   ........ ......n.
1E30:  8B F0 8E 06 06 0B 26 C4  1E 7C C9 26 C7 00 FF FF   ......&. .|.&....
1E40:  B8 00 00 E9 00 00 5E 5F  8B E5 5D CB 55 8B EC 81   ......^_ ..].U...
1E50:  EC 0A 00 57 56 B8 1A 00  F7 6E 06 8B D8 8E 06 F8   ...WV... .n......
1E60:  0A 26 83 BF 20 04 FF 75  03 E9 78 02 8B 46 06 89   .&.. ..u ..x..F..
1E70:  46 FE B8 1A 00 F7 6E FE  8B D8 8E 06 F8 0A 26 8B   F.....n. ......&.
1E80:  87 20 04 89 46 FE 3B 46  06 75 03 E9 56 02 B8 1A   . ..F.;F .u..V...
1E90:  00 F7 6E FE 8B D8 26 8B  87 1E 04 89 46 FA 40 75   ..n...&. ....F.@u
1EA0:  03 E9 3D 02 B8 1A 00 F7  6E FA 8B D8 8E 06 00 0B   ..=..... n.......
1EB0:  26 83 BF 8E 0C FF 74 03  E9 09 01 B8 01 00 50 FF   &.....t. ......P.
1EC0:  76 FA FF 76 08 B8 7A 0C  06 50 9A ED 2C 25 00 83   v..v..z. .P..,%..
1ED0:  C4 0A 3D 00 00 75 03 E9  03 00 E9 95 FF B8 1A 00   ..=..u.. ........
1EE0:  F7 6E FA 8B D8 8E 06 00  0B 26 8A 87 92 0C 25 60   .n...... .&....%`
1EF0:  00 B1 05 D3 E8 89 46 FC  83 7E FC 03 74 03 E9 43   ......F. .~..t..C
1F00:  00 B8 1A 00 F7 6E FE 8B  D8 8E 06 F8 0A 26 8A 87   .....n.. .....&..
1F10:  24 04 25 60 00 D3 E8 89  46 FC B8 1A 00 F7 6E FA   $.%`.... F.....n.
1F20:  8B D8 8E 06 00 0B 26 8A  87 92 0C 8B 56 FC D3 E2   ......&. ....V...
1F30:  32 C2 25 60 00 8B C8 B8  1A 00 F7 6E FA 8B D8 26   2.%`.... ...n...&
1F40:  31 8F 92 0C FF 46 FC 83  7E FC 03 74 03 E9 05 00   1....F.. ~..t....
1F50:  C7 46 FC 00 00 FF 76 FC  FF 76 08 B8 7A 0C B9 AA   .F....v. .v..z...
1F60:  14 51 50 9A DF 27 25 00  83 C4 08 89 46 F8 40 74   .QP..'%. ....F.@t
1F70:  03 E9 06 00 8B 46 08 89  46 F8 B8 1A 00 F7 6E F8   .....F.. F.....n.
1F80:  8B D8 8E 06 00 0B 26 8B  87 8E 0C 89 46 F6 83 7E   ......&. ....F..~
1F90:  F6 FF 74 03 E9 06 00 8B  46 F8 89 46 F6 B8 1A 00   ..t..... F..F....
1FA0:  F7 6E FA 8B D8 8E 06 00  0B 8B 46 F6 26 89 87 8E   .n...... ..F.&...
1FB0:  0C B8 1A 00 F7 6E F8 8B  D8 8B 46 FA 26 89 87 8E   .....n.. ..F.&...
1FC0:  0C E9 AE FE B8 1A 00 F7  6E 08 8B D8 8E 06 00 0B   ........ n.......
1FD0:  26 83 BF 8E 0C FF 74 03  E9 06 01 B8 01 00 50 FF   &.....t. ......P.
1FE0:  76 FA FF 76 08 B8 7A 0C  06 50 9A ED 2C 25 00 83   v..v..z. .P..,%..
1FF0:  C4 0A 3D 00 00 75 03 E9  03 00 E9 75 FE B8 1A 00   ..=..u.. ...u....
2000:  F7 6E 08 8B D8 8E 06 00  0B 26 8A 87 92 0C 25 60   .n...... .&....%`
2010:  00 B1 05 D3 E8 89 46 FC  83 7E FC 03 74 03 E9 43   ......F. .~..t..C
2020:  00 B8 1A 00 F7 6E 06 8B  D8 8E 06 F8 0A 26 8A 87   .....n.. .....&..
2030:  24 04 25 60 00 D3 E8 89  46 FC B8 1A 00 F7 6E 08   $.%`.... F.....n.
2040:  8B D8 8E 06 00 0B 26 8A  87 92 0C 8B 56 FC D3 E2   ......&. ....V...
2050:  32 C2 25 60 00 8B C8 B8  1A 00 F7 6E 08 8B D8 26   2.%`.... ...n...&
2060:  31 8F 92 0C FF 46 FC 83  7E FC 03 74 03 E9 05 00   1....F.. ~..t....
2070:  C7 46 FC 00 00 FF 76 FC  FF 76 FA B8 7A 0C B9 AA   .F....v. .v..z...
2080:  14 51 50 9A DF 27 25 00  83 C4 08 89 46 F8 40 74   .QP..'%. ....F.@t
2090:  03 E9 06 00 8B 46 FA 89  46 F8 B8 1A 00 F7 6E F8   .....F.. F.....n.
20A0:  8B D8 8E 06 00 0B 26 8B  87 8E 0C 89 46 F6 83 7E   ......&. ....F..~
20B0:  F6 FF 74 03 E9 06 00 8B  46 F8 89 46 F6 B8 1A 00   ..t..... F..F....
20C0:  F7 6E 08 8B D8 8E 06 00  0B 8B 46 F6 26 89 87 8E   .n...... ..F.&...
20D0:  0C B8 1A 00 F7 6E F8 8B  D8 8B 46 08 26 89 87 8E   .....n.. ..F.&...
```

```
20E0:  0C E9 8E FD B8 1A 00 F7  6E 06 8B D8 8E 06 F8 0A   ........ n.......
20F0:  8B 46 08 26 89 87 1E 04  5E 5F 8B E5 5D CB 55 8B   .F.&.... ^_..].U.
2100:  EC 81 EC 06 00 57 56 B8  1A 00 F7 6E 08 8B D8 8E   .....WV. ...n....
2110:  06 F8 0A 26 8A 87 24 04  25 60 00 B1 05 D3 E8 8B   ...&..$. %`......
2120:  D0 B8 1A 00 8B DA F7 6E  06 8B F0 8E 06 00 0B 26   .......n .......&
2130:  8A 84 92 0C 25 60 00 D3  E8 2B C3 89 46 FC 8B 46   ....%`.. .+..F..F
2140:  06 89 46 FE B8 1A 00 F7  6E FE 8B D8 8E 06 00 0B   ..F..... n.......
2150:  26 8A 87 92 0C 25 60 00  B1 05 D3 E8 03 46 FC 89   &....%`. .....F..
2160:  46 FA 83 7E FA 00 7C 03  E9 04 00 83 46 FA 02 83   F..~..|. ....F...
2170:  7E FA 02 7F 03 E9 04 00  83 6E FA 02 B8 1A 00 F7   ~....... .n......
2180:  6E FE 8B D8 8E 06 00 0B  26 8A 87 92 0C B1 05 8B   n....... &.......
2190:  56 FA D3 E2 32 C2 25 60  00 8B C8 B8 1A 00 F7 6E   V...2.%` .......n
21A0:  FE 8B D8 26 31 8F 92 0C  B8 1A 00 F7 6E FE 8B D8   ...&1... ....n...
21B0:  26 8B 87 8E 0C 89 46 FE  83 7E FE FF 75 03 E9 0B   &.....F. .~..u...
21C0:  00 8B 46 06 39 46 FE 74  03 E9 78 FF 5E 5F 8B E5   ..F.9F.t ..x.^_..
21D0:  5D CB 55 8B EC 81 EC 08  00 57 56 B8 1A 00 F7 6E   ].U..... .WV....n
21E0:  0A 8B D8 8E 06 00 0B 26  8B 87 90 0C 89 46 FA B8   .......& .....F..
21F0:  1A 00 F7 6E 06 8B D8 8E  06 F8 0A B8 1A 00 F7 6E   ...n.... .......n
2200:  0A 8B F0 8E 06 00 0B 26  8B 84 7A 0C F7 6E FA 8E   .......& ..z..n..
2210:  06 F8 0A 26 03 87 0C 04  8B 4E FA 41 99 F7 F9 8B   ...&.... .N.A....
2220:  C8 B8 1A 00 F7 6E 0A 8B  D8 8C C0 8E 06 00 0B 26   .....n.. .......&
2230:  89 8F 7A 0C 8E C0 B8 1A  00 F7 6E 06 8B D8 B8 1A   ..z..... ..n.....
2240:  00 F7 6E 0A 8B F0 8E 06  00 0B 26 8B 84 7C 0C F7   ..n..... ..&..|..
2250:  6E FA 8E 06 F8 0A 26 03  87 0E 04 8B 4E FA 41 99   n.....&. ....N.A.
2260:  F7 F9 8B C8 B8 1A 00 F7  6E 0A 8B D8 8C C0 8E 06   ........ n.......
2270:  00 0B 26 89 8F 7C 0C 8E  C0 B8 1A 00 F7 6E 08 8B   ..&..|.. .....n..
2280:  D8 B8 1A 00 F7 6E 0C 8B  F0 8E 06 00 0B 26 8B 84   .....n.. .....&..
2290:  7A 0C F7 6E FA 8E 06 F8  0A 26 03 87 0C 04 8B 4E   z..n.... .&.....N
22A0:  FA 41 99 F7 F9 8B C8 B8  1A 00 F7 6E 0C 8B D8 8C   .A...... ...n....
22B0:  C0 8E 06 00 0B 26 89 8F  7A 0C 8E C0 B8 1A 00 F7   .....&.. z.......
22C0:  6E 08 8B D8 B8 1A 00 F7  6E 0C 8B F0 8E 06 00 0B   n....... n.......
22D0:  26 8B 84 7C 0C F7 6E FA  8C C1 8E 06 F8 0A 26 03   &..|..n. ......&.
22E0:  87 0E 04 8B 5E FA 43 99  F7 FB 8B D0 B8 1A 00 8B   ....^.C. ........
22F0:  DA F7 6E 0C 8B F0 8E C1  26 89 9C 7C 0C C7 46 F8   ..n..... &..|..F.
2300:  00 00 E9 03 00 FF 46 F8  83 7E F8 02 7E 03 E9 45   ......F. .~..~..E
2310:  00 B8 1A 00 F7 6E 06 8B  5E F8 8B CB D1 E3 03 D9   .....n.. ^.......
2320:  D1 E3 03 D8 8E 06 F8 0A  8B 46 08 26 39 87 10 04   ........ .F.&9...
2330:  74 03 E9 1E 00 B8 1A 00  F7 6E 06 8B 5E F8 8B CB   t....... .n..^...
2340:  D1 E3 03 D9 D1 E3 03 D8  26 8B 87 12 04 89 46 FE   ........ &.....F.
2350:  E9 03 00 E9 AF FF C7 46  F8 00 00 E9 03 00 FF 46   .......F .......F
2360:  F8 83 7E F8 02 7E 03 E9  45 00 B8 1A 00 F7 6E 0A   ..~..~.. E.....n.
2370:  8B 5E F8 8B CB D1 E3 03  D9 D1 E3 03 D8 8E 06 00   .^...... ........
2380:  0B 8B 46 0C 26 39 87 7E  0C 74 03 E9 1E 00 B8 1A   ..F.&9.~ .t......
2390:  00 F7 6E 0A 8B 5E F8 8B  CB D1 E3 03 D9 D1 E3 03   ..n..^.. ........
23A0:  D8 26 8B 87 80 0C 89 46  FC E9 03 00 E9 AF FF FF   .&.....F ........
23B0:  76 FA FF 76 FC FF 76 FE  9A 98 0A 25 00 83 C4 06   v..v..v. ...%....
23C0:  8B C8 B8 1A 00 F7 6E 0A  8B 5E F8 8B D3 D1 E3 03   ......n. .^......
23D0:  DA D1 E3 03 D8 8E 06 00  0B 26 89 8F 80 0C C7 46   ........ .&.....F
23E0:  F8 00 00 E9 03 00 FF 46  F8 83 7E F8 02 7E 03 E9   .......F ..~..~..
23F0:  45 00 B8 1A 00 F7 6E 08  8B 5E F8 8B CB D1 E3 03   E.....n. .^......
2400:  D9 D1 E3 03 D8 8E 06 F8  0A 8B 46 06 26 39 87 10   ........ ..F.&9..
2410:  04 74 03 E9 1E 00 B8 1A  00 F7 6E 08 8B 5E F8 8B   .t...... ..n..^..
2420:  CB D1 E3 03 D9 D1 E3 03  D8 26 8B 87 12 04 89 46   ........ .&.....F
```

B_ENROLL.DMP                Tuesday, July 13, 1993 1:12 pm                Page 12

```
2430:  FE E9 03 00 E9 AF FF C7  46 F8 00 00 E9 03 00 FF   ........ F.......
2440:  46 F8 83 7E F8 02 7E 03  E9 45 00 B8 1A 00 F7 6E   F..~..~. .E.....n
2450:  0C 8B 5E F8 8B CB D1 E3  03 D9 D1 E3 03 D8 8E 06   ..^..... ........
2460:  00 0B 8B 46 0A 26 39 87  7E 0C 74 03 E9 1E 00 B8   ...F.&9. ~.t.....
2470:  1A 00 F7 6E 0C 8B 5E F8  8B CB D1 E3 03 D9 D1 E3   ...n..^. ........
2480:  03 D8 26 8B 87 80 0C 89  46 FC E9 03 00 E9 AF FF   ..&..... F.......
2490:  FF 76 FA FF 76 FC FF 76  FE 9A 98 0A 25 00 83 C4   .v..v..v ....%...
24A0:  06 8B C8 B8 1A 00 F7 6E  0C 8B 5E F8 8B D3 D1 E3   .......n ..^.....
24B0:  03 DA D1 E3 03 D8 8E 06  00 0B 26 89 8F 80 0C B8   ........ ..&.....
24C0:  1A 00 F7 6E 06 8B D8 8E  06 F8 0A 26 F6 87 24 04   ...n.... ...&..$.
24D0:  01 75 03 E9 12 00 B8 1A  00 F7 6E 0A 8B D8 8E 06   .u...... ..n.....
24E0:  00 0B 26 83 8F 92 0C 01  B8 1A 00 F7 6E 08 8B D8   ..&..... ....n...
24F0:  8E 06 F8 0A 26 F6 87 24  04 01 75 03 E9 12 00 B8   ....&..$ ..u.....
2500:  1A 00 F7 6E 0C 8B D8 8E  06 00 0B 26 83 8F 92 0C   ...n.... ...&....
2510:  01 B8 1A 00 F7 6E 0A 8B  D8 8E 06 00 0B 26 FF 87   .....n.. .....&..
2520:  90 0C B8 1A 00 F7 6E 0C  8B D8 26 FF 87 90 0C B8   ......n. ..&.....
2530:  1A 00 F7 6E 06 8B D8 8E  06 F8 0A 8B 46 0A 26 89   ...n.... ....F.&.
2540:  87 1E 04 B8 1A 00 F7 6E  08 8B D8 8B 46 0C 26 89   .......n ....F.&.
2550:  87 1E 04 FF 76 0A FF 76  06 9A FC 19 25 00 83 C4   ....v..v ....%...
2560:  04 FF 76 0C FF 76 08 9A  FC 19 25 00 83 C4 04 5E   ..v..v.. ..%....^
2570:  5F 8B E5 5D CB 55 8B EC  81 EC 08 00 57 56 B8 1A   _..].U.. ....WV..
2580:  00 F7 6E 08 8B D8 8E 06  00 0B 26 8B 87 7E 0C 89   ..n..... ..&..~..
2590:  46 FE 83 7E FE FF 74 03  E9 1F 00 B8 1A 00 F7 6E   F..~..t. .......n
25A0:  08 8B D8 26 8B 87 84 0C  89 46 FE 83 7E FE FF 74   ...&.... .F..~..t
25B0:  03 E9 06 00 B8 00 00 E9  DA 00 B8 1A 00 F7 6E FE   ........ ......n.
25C0:  8B D8 8E 06 00 0B 26 83  BF 8E 0C FF 75 03 E9 BD   ......&. ....u...
25D0:  00 8B 46 FE 89 46 FA 8B  46 06 89 46 FC B8 1A 00   ..F..F.. F..F....
25E0:  F7 6E 06 8B D8 8E 06 F8  0A 26 83 BF 20 04 FF 75   .n...... .&.. ..u
25F0:  03 E9 47 00 B8 1A 00 F7  6E FC 8B D8 8E 06 F8 0A   ..G..... n.......
2600:  26 8B 87 1E 04 89 46 F8  8B 46 FA 39 46 F8 74 03   &.....F. .F.9F.t.
2610:  E9 06 00 B8 00 00 E9 7B  00 B8 1A 00 F7 6E FC 8B   .......{ .....n..
2620:  D8 8E 06 F8 0A 26 8B 87  20 04 89 46 FC 8B 46 FC   .....&.. ..F..F.
2630:  39 46 06 74 03 E9 BC FF  E9 34 00 B8 1A 00 F7 6E   9F.t.... .4.....n
2640:  FC 8B D8 8E 06 F8 0A 26  8B 87 1E 04 89 46 F8 83   .......& .....F..
2650:  7E F8 FF 74 03 E9 06 00  B8 01 00 E9 36 00 8B 46   ~..t.... ....6..F
2660:  FA 39 46 F8 74 03 E9 06  00 B8 00 00 E9 25 00 B8   .9F.t... .....%..
2670:  1A 00 F7 6E FA 8B D8 8E  06 00 0B 26 8B 87 8E 0C   ...n.... ...&....
2680:  89 46 FA 8B 46 FA 39 46  FE 74 03 E9 49 FF B8 01   .F..F.9F .t..I...
2690:  00 E9 00 00 5E 5F 8B E5  5D CB 55 8B EC 81 EC 08   ....^_.. ].U.....
26A0:  00 57 56 C7 46 FE FF FF  83 7E 0A FF 75 03 E9 60   .WV.F... .~..u..`
26B0:  02 8B 46 0A 89 46 FE 8B  46 0A 89 46 FA B8 1A 00   ..F..F.. F..F....
26C0:  F7 6E FA 8B F0 C4 5E 06  26 8A 40 18 25 60 00 B1   .n....^. &.@.%`..
26D0:  05 D3 E8 89 46 F8 83 7E  F8 03 74 03 E9 06 00 8B   ....F..~ ..t.....
26E0:  46 FE E9 32 02 8B 46 0C  29 46 F8 8B 46 F8 E9 D9   F..2..F. )F..F...
26F0:  01 C7 46 F8 02 00 B8 1A  00 F7 6E FA 8B F0 C4 5E   ..F..... ..n....^
2700:  06 26 8A 40 18 B1 05 8B  56 F8 D3 E2 32 C2 25 60   .&.@.... V...2.%`
2710:  00 8B C8 B8 1A 00 F7 6E  FA 8B F0 C4 5E 06 26 31   .......n ....^.&1
2720:  48 18 83 7E 0C FF 74 03  E9 75 00 8B 46 0A 39 46   H..~..t. .u..F.9F
2730:  FA 74 03 E9 09 00 83 7E  0E 00 75 03 E9 61 00 FF   .t.....~ ..u..a..
2740:  76 FA FF 76 08 FF 76 06  9A CD 24 25 00 83 C4 06   v..v..v. ..$%....
2750:  89 46 FC B8 1A 00 F7 6E  FC 8B F0 C4 5E 06 26 8A   .F.....n ....^.&.
2760:  40 18 24 60 3C 40 74 03  E9 1C 00 B8 00 00 50 B8   @.$`<@t. ......P.
2770:  01 00 50 FF 76 FC FF 76  08 FF 76 06 9A 4A 22 25   ..P.v..v ..v..J"%
```

```
2780:  00 83 C4 0A E9 19 00 B8  00 00 50 B8 FF FF 50 FF   ........ ..P...P.
2790:  76 FC FF 76 08 FF 76 06  9A 4A 22 25 00 83 C4 0A   v..v..v. .J"%....
27A0:  E9 48 01 C7 46 F8 00 00  B8 1A 00 F7 6E FA 8B F0   .H..F... ....n...
27B0:  C4 5E 06 26 8A 40 18 B1  05 8B 56 F8 D3 E2 32 C2   .^.&.@.. ..V...2.
27C0:  25 60 00 8B C8 B8 1A 00  F7 6E FA 8B F0 C4 5E 06   %`...... .n....^.
27D0:  26 31 48 18 83 7E 0C 01  74 03 E9 75 00 8B 46 0A   &1H..~.. t..u..F.
27E0:  39 46 FA 74 03 E9 09 00  83 7E 0E 00 75 03 E9 61   9F.t.... .~..u..a
27F0:  00 FF 76 FA FF 76 08 FF  76 06 9A CD 24 25 00 83   ..v..v.. v...$%..
2800:  C4 06 89 46 FC B8 1A 00  F7 6E FC 8B F0 C4 5E 06   ...F.... .n....^.
2810:  26 8A 40 18 24 60 3C 40  74 03 E9 1C 00 B8 00 00   &.@.$`<@ t.......
2820:  50 B8 01 00 50 FF 76 FC  FF 76 08 FF 76 06 9A 4A   P...P.v. .v..v..J
2830:  22 25 00 83 C4 0A E9 19  00 B8 00 00 50 B8 FF FF   "%...... ....P...
2840:  50 FF 76 FC FF 76 08 FF  76 06 9A 4A 22 25 00 83   P.v..v.. v..J"%..
2850:  C4 0A E9 96 00 B8 1A 00  F7 6E FA 8B F0 C4 5E 06   ........ .n....^.
2860:  26 8A 40 18 B1 05 8B 56  F8 D3 E2 32 C2 25 60 00   &.@....V ...2.%`.
2870:  8B C8 B8 1A 00 F7 6E FA  8B F0 C4 5E 06 26 31 48   ......n. ...^.&1H
2880:  18 8B 46 0A 39 46 FA 74  03 E9 09 00 83 7E 0E 00   ..F.9F.t .....~..
2890:  75 03 E9 2F 00 FF 76 FA  FF 76 08 FF 76 06 9A CD   u../..v. .v..v...
28A0:  24 25 00 83 C4 06 89 46  FC B8 00 00 50 FF 76 0C   $%.....F ....P.v.
28B0:  FF 76 FC FF 76 08 FF 76  06 9A 4A 22 25 00 83 C4   .v..v..v ..J"%...
28C0:  0A 89 46 FE E9 24 00 E9  21 00 40 75 03 E9 21 FE   ..F..$.. !.@u..!.
28D0:  48 75 03 E9 D2 FE 48 75  03 E9 79 FF 48 75 03 E9   Hu....Hu ..y.Hu..
28E0:  14 FE 48 75 03 E9 BB FE  E9 00 00 B8 1A 00 F7 6E   ..Hu.... .......n
28F0:  FA 8B F0 C4 5E 06 26 8B  40 14 89 46 FA 83 7E FA   ....^.&. @..F..~.
2900:  FF 75 03 E9 0B 00 8B 46  0A 39 46 FA 74 03 E9 AC   .u.....F .9F.t...
2910:  FD 8B 46 FE E9 00 00 5E  5F 8B E5 5D CB 55 8B EC   ..F....^ _..].U..
2920:  81 EC 02 00 57 56 83 7E  0A FF 74 03 E9 06 00 B8   ....WV.~ ..t.....
2930:  FF FF E9 33 00 B8 1A 00  F7 6E 0A 8B F0 C4 5E 06   ...3.... .n....^.
2940:  26 8B 40 04 89 46 FE 83  7E FE FF 74 03 E9 12 00   &.@..F.. ~..t....
2950:  B8 1A 00 F7 6E 0A 8B F0  C4 5E 06 26 8B 40 0A 89   ....n... .^.&.@..
2960:  46 FE 8B 46 FE E9 00 00  5E 5F 8B E5 5D CB 55 8B   F..F.... ^_..].U.
2970:  EC 81 EC 06 00 57 56 C4  5E 0A 26 83 3F FF 74 03   .....WV. ^.&.?.t.
2980:  E9 8A 00 C4 5E 0E 26 8B  07 C4 5E 0A 26 89 07 C4   ....^.&. ..^.&...
2990:  5E 0E 26 FF 37 FF 76 08  FF 76 06 9A CD 24 25 00   ^.&.7.v. .v...$%.
29A0:  83 C4 06 C4 5E 0E 26 89  07 B8 1A 00 C4 5E 0A 26   ....^.&. .....^.&
29B0:  F7 2F 8B F0 C4 5E 06 26  F6 40 18 80 74 03 E9 18   ./...^.& .@..t...
29C0:  00 B8 1A 00 C4 5E 0E 26  F7 2F 8B F0 C4 5E 06 26   .....^.& ./...^.&
29D0:  F6 40 18 80 75 03 E9 06  00 B8 FF FF E9 4A 02 B8   .@..u... .....J..
29E0:  1A 00 C4 5E 0A 26 F7 2F  8B F0 C4 5E 06 26 81 48   ...^.&./ ...^.&.H
29F0:  18 80 00 B8 1A 00 C4 5E  0E 26 F7 2F 8B F0 C4 5E   .......^ .&./...^
2A00:  06 26 81 48 18 80 00 B8  00 00 E9 1C 02 B8 1A 00   .&.H.... ........
2A10:  C4 5E 0A 26 F7 2F 8B F0  C4 5E 06 26 8A 40 18 24   .^.&./.. .^.&.@.$
2A20:  60 3C 40 74 03 E9 52 00  B8 00 00 50 C4 5E 0E 26   `<@t..R. ...P.^.&
2A30:  FF 37 C4 5E 0A 26 FF 37  FF 76 08 FF 76 06 9A 61   .7.^.&.7 .v..v..a
2A40:  2B 25 00 83 C4 0A 3D 00  00 74 03 E9 26 00 B8 01   +%....=. .t..&...
2A50:  00 50 C4 5E 0E 26 FF 37  C4 5E 0A 26 FF 37 FF 76   .P.^.&.7 .^.&.7.v
2A60:  08 FF 76 06 9A 61 2B 25  00 83 C4 0A 3D 00 00 75   ..v..a+% ....=..u
2A70:  03 E9 06 00 B8 FF FF E9  AF 01 B8 1A 00 C4 5E 0E   ........ ......^.
2A80:  26 F7 2F 8B F0 C4 5E 06  26 83 78 14 FF 75 03 E9   &./...^. &.x..u..
2A90:  44 00 83 7E 12 00 7F 03  E9 3B 00 B8 00 00 50 C4   D..~.... .;....P.
2AA0:  5E 0E 26 FF 37 FF 76 08  FF 76 06 9A DF 27 25 00   ^.&.7.v. .v...'%.
2AB0:  83 C4 08 C4 5E 0A 26 89  07 C4 5E 0A 26 FF 37 FF   ....^.&. ..^.&.7.
2AC0:  76 08 FF 76 06 9A CD 24  25 00 83 C4 06 C4 5E 0E   v..v...$ %.....^.
```

B_ENROLL.DMP          Tuesday, July 13, 1993 1:12 pm          Page 14

```
2AD0:  26 89 07 E9 DD 00 C4 5E  0A 26 8B 07 89 46 FA B8   &......^ .&...F..
2AE0:  1A 00 F7 6E FA 8B F0 C4  5E 06 26 83 78 14 FF 74   ...n.... ^.&.x..t
2AF0:  03 E9 06 00 B8 FF FF E9  2F 01 83 7E FC 02 74 03   ........ /..~..t.
2B00:  E9 08 00 C7 46 FC 01 00  E9 05 00 C7 46 FC 02 00   ....F... ....F...
2B10:  8B 46 FA 89 46 FE FF 76  FC FF 76 FE FF 76 08 FF   .F..F..v ..v..v..
2B20:  76 06 9A DF 27 25 00 83  C4 08 89 46 FA 83 7E FA   v...'%.. ...F..~.
2B30:  FF 74 03 E9 25 00 83 7E  FC 01 75 03 E9 1C 00 C7   .t..%..~ ..u.....
2B40:  46 FC 01 00 FF 76 FC FF  76 FE FF 76 08 FF 76 06   F....v.. v..v..v.
2B50:  9A DF 27 25 00 83 C4 08  89 46 FA 83 7E FA FF 74   ..'%.... .F..~..t
2B60:  03 E9 06 00 B8 FF FF E9  BF 00 83 7E FC 01 74 03   ........ ...~..t.
2B70:  E9 17 00 FF 76 FA FF 76  08 FF 76 06 9A CD 24 25   ....v..v ..v...$%
2B80:  00 83 C4 06 89 46 FA E9  03 00 E9 03 00 E9 4F FF   .....F.. ......O.
2B90:  8B 46 FA C4 5E 0A 26 89  07 C4 5E 0A 26 FF 37 FF   .F..^.&. ..^.&.7.
2BA0:  76 08 FF 76 06 9A CD 24  25 00 83 C4 06 C4 5E 0E   v..v...$ %.....^.
2BB0:  26 89 07 C4 5E 0E 26 83  3F FF 74 03 E9 06 00 B8   &...^.&. ?.t.....
2BC0:  FF FF E9 64 00 B8 1A 00  C4 5E 0A 26 F7 2F 8B F0   ...d.... .^.&./..
2BD0:  C4 5E 06 26 F6 40 18 80  74 03 E9 18 00 B8 1A 00   .^.&.@.. t.......
2BE0:  C4 5E 0E 26 F7 2F 8B F0  C4 5E 06 26 F6 40 18 80   .^.&./.. .^.&.@..
2BF0:  75 03 E9 06 00 B8 FF FF  E9 2E 00 B8 1A 00 C4 5E   u....... .......^
2C00:  0A 26 F7 2F 8B F0 C4 5E  06 26 81 48 18 80 00 B8   .&./...^ .&.H....
2C10:  1A 00 C4 5E 0E 26 F7 2F  8B F0 C4 5E 06 26 81 48   ...^.&./ ...^.&.H
2C20:  18 80 00 B8 00 00 E9 00  00 5E 5F 8B E5 5D CB 55   ........ .^_..].U
2C30:  8B EC 81 EC 02 00 57 56  B8 1A 00 F7 6E 0A 8B F0   ......WV ....n...
2C40:  C4 5E 06 26 8B 40 14 89  46 FE 83 7E FE FF 75 03   .^.&.@.. F..~..u.
2C50:  E9 44 00 8B 46 0A 39 46  FE 75 03 E9 39 00 B8 1A   .D..F.9F .u..9...
2C60:  00 F7 6E FE 8B F0 C4 5E  06 26 8A 40 18 25 60 00   ..n....^ .&.@.%`.
2C70:  B1 05 D3 E8 3B 46 0C 74  03 E9 06 00 8B 46 FE E9   ....;F.t .....F..
2C80:  1B 00 B8 1A 00 F7 6E FE  8B F0 C4 5E 06 26 8B 40   ......n. ...^.&.@
2C90:  14 89 46 FE E9 B3 FF B8  FF FF E9 00 00 5E 5F 8B   ..F..... .....^_.
2CA0:  E5 5D CB 55 8B EC 81 EC  08 00 57 56 8B 46 1A 89   .].U.... ..WV.F..
2CB0:  46 F8 B8 1A 00 F7 6E 1A  8B F0 C4 5E 12 26 8A 40   F.....n. ...^.&.@
2CC0:  18 25 60 00 B1 05 D3 E8  89 46 FE B8 1A 00 F7 6E   .%`..... .F.....n
2CD0:  0E 8B F0 C4 5E 06 26 8A  40 18 25 60 00 D3 E8 89   ....^.&. @.%`....
2CE0:  46 FC 83 7E FE 03 74 03  E9 14 00 FF 76 1C FF 76   F..~..t. ....v..v
2CF0:  14 FF 76 12 9A 6B 29 25  00 83 C4 06 89 46 FE 83   ..v..k)% .....F..
2D00:  7E FC 03 74 03 E9 14 00  FF 76 10 FF 76 08 FF 76   ~..t.... .v..v..v
2D10:  06 9A 6B 29 25 00 83 C4  06 89 46 FC 83 7E FE 03   ..k)%... ..F..~..
2D20:  75 03 E9 8A 00 83 7E FC  03 75 03 E9 81 00 8B 46   u.....~. .u.....F
2D30:  FE 2B 46 FC 89 46 FA 83  7E FA FF 7C 03 E9 04 00   .+F..F.. ~..|....
2D40:  83 46 FA 03 83 7E FA 01  7F 03 E9 04 00 83 6E FA   .F...~.. ......n.
2D50:  03 83 7E FA 00 75 03 E9  55 00 B8 1A 00 F7 6E 1A   ..~..u.. U.....n.
2D60:  8B F0 C4 5E 12 26 8A 40  18 24 60 3C 60 75 03 E9   ...^.&.@ .$`<`u..
2D70:  20 00 B8 01 00 50 FF 76  FA FF 76 1A B8 7A 0C B9    ....P.v ..v..z..
2D80:  AA 14 51 50 9A 4A 22 25  00 83 C4 0A 89 46 F8 E9   ..QP.J"% .....F..
2D90:  1D 00 B8 01 00 50 FF 76  FA FF 76 1C B8 7A 0C B9   .....P.v ..v..z..
2DA0:  AA 14 51 50 9A 4A 22 25  00 83 C4 0A 89 46 F8 8B   ..QP.J"% .....F..
2DB0:  46 F8 E9 00 00 5E 5F 8B  E5 5D CB 55 8B EC 81 EC   F....^_. .].U....
2DC0:  02 00 57 56 C7 46 FE 03  00 B8 1A 00 F7 6E 0A 8B   ..WV.F.. .....n..
2DD0:  F0 C4 5E 06 26 8A 40 18  25 60 00 B1 05 D3 E8 E9   ..^.&.@. %`......
2DE0:  13 00 C7 46 FE 01 00 E9  21 00 C7 46 FE 00 00 E9   ...F.... !..F....
2DF0:  19 00 E9 16 00 0B C0 75  03 E9 E6 FF 48 75 03 E9   .......u ....Hu..
2E00:  E8 FF 48 75 03 E9 DA FF  E9 00 00 8B 46 FE E9 00   ..Hu.... ....F...
2E10:  00 5E 5F 8B E5 5D CB 55  8B EC 81 EC 08 00 57 56   .^_..].U ......WV
```

```
2E20:  B8 00 00 89 46 F8 89 46  FE 89 46 FC B8 1A 00 F7   ....F..F ..F.....
2E30:  6E 0A 8B F0 C4 5E 06 26  8B 40 14 89 46 FA 83 7E   n....^.& .@..F..~
2E40:  FA FF 75 03 E9 64 00 8B  46 0A 39 46 FA 75 03 E9   ..u..d.. F.9F.u..
2E50:  59 00 B8 1A 00 F7 6E FA  8B F0 C4 5E 06 26 8A 40   Y.....n. ...^.&.@
2E60:  18 25 60 00 B1 05 D3 E8  E9 15 00 FF 46 FE E9 25   .%`..... ....F..%
2E70:  00 FF 46 FC E9 1F 00 FF  46 F8 E9 19 00 E9 16 00   ..F..... F.......
2E80:  0B C0 75 03 E9 E4 FF 48  75 03 E9 EA FF 48 75 03   ..u....H u....Hu.
2E90:  E9 DE FF E9 00 00 B8 1A  00 F7 6E FA 8B F0 C4 5E   ........ ..n....^
2EA0:  06 26 8B 40 14 89 46 FA  E9 93 FF 83 7E FE 01 7E   .&.@..F. ....~..~
2EB0:  03 E9 12 00 83 7E FC 01  7E 03 E9 09 00 83 7E F8   .....~.. ~.....~.
2EC0:  01 7F 03 E9 06 00 B8 00  00 E9 06 00 B8 01 00 E9   ........ ........
2ED0:  00 00 5E 5F 8B E5 5D CB  55 8B EC 81 EC 04 00 57   ..^_..]. U......W
2EE0:  56 B8 1A 00 F7 6E 06 8B  D8 8E 06 00 0B 26 8A 87   V....n.. .....&..
2EF0:  92 0C 24 60 3C 20 74 03  E9 2C 00 B8 1A 00 F7 6E   ..$`< t. .,.....n
2F00:  06 8B D8 26 8A 87 92 0C  24 60 3C 60 74 03 E9 35   ...&.... $`<`t..5
2F10:  00 B8 1A 00 F7 6E 06 8B  D8 26 8A 87 92 0C 24 60   .....n.. .&....$`
2F20:  3C 20 74 03 E9 1F 00 8B  46 06 89 46 FC FF 76 FC   < t..... F..F..v.
2F30:  B8 7A 0C B9 AA 14 51 50  9A CD 24 25 00 83 C4 06   .z....QP ..$%....
2F40:  89 46 FE E9 1C 00 8B 46  06 89 46 FE FF 76 FE B8   .F.....F ..F..v..
2F50:  7A 0C B9 AA 14 51 50 9A  CD 24 25 00 83 C4 06 89   z....QP. .$%.....
2F60:  46 FC B8 01 00 50 8D 46  FE 16 50 8D 46 FC 16 50   F....P.F ..P.F..P
2F70:  B8 7A 0C B9 AA 14 51 50  9A B1 25 0A 06 83 C4 0E   .z....QP ..%.....
2F80:  40 74 03 E9 06 00 B8 00  00 E9 1F 00 8B 46 08 39   @t...... .....F.9
2F90:  46 FC 75 03 E9 0B 00 8B  46 08 39 46 FE 74 03 E9   F.u..... F.9F.t..
2FA0:  06 00 B8 01 00 E9 03 00  E9 B7 FF 5E 5F 8B E5 5D   ........ ...^_..]
2FB0:  CB 55 8B EC 81 EC 06 00  57 56 FF 76 0E FF 76 0A   .U...... WV.v..v.
2FC0:  FF 76 08 FF 76 06 9A DF  27 25 00 83 C4 08 89 46   .v..v... '%.....F
2FD0:  FE 83 7E FE FF 75 03 E9  54 00 FF 76 FE FF 76 08   ..~..u.. T..v..v.
2FE0:  FF 76 06 9A CD 24 25 00  83 C4 06 89 46 FC 8B 46   .v...$%. ....F..F
2FF0:  FC 89 46 FA B8 1A 00 F7  6E FA 8B F0 C4 5E 06 26   ..F..... n....^.&
3000:  8B 40 14 89 46 FA 3B 46  0C 74 03 E9 06 00 B8 01   .@..F.;F .t......
3010:  00 E9 20 00 8B 46 FC 39  46 FA 75 03 E9 09 00 83   .. ..F.9 F.u.....
3020:  7E FA FF 74 03 E9 03 00  E9 03 00 E9 C6 FF B8 00   ~..t.... ........
3030:  00 E9 00 00 5E 5F 8B E5  5D CB 55 8B EC 81 EC 04   ....^_.. ].U.....
3040:  00 57 56 B8 1A 00 C4 5E  0C 26 F7 2F 8B F0 C4 5E   .WV....^ .&./...^
3050:  06 26 8A 40 18 25 60 00  B1 05 D3 E8 89 46 FE FF   .&.@.%`. .....F..
3060:  76 FE C4 5E 0C 26 FF 37  FF 76 08 FF 76 06 9A DF   v..^.&.7 .v..v...
3070:  27 25 00 83 C4 08 89 46  FC 83 7E FC FF 75 03 E9   '%.....F ..~..u..
3080:  0B 00 8B 46 0A 39 46 FC  74 03 E9 09 00 B8 FF FF   ...F.9F. t.......
3090:  E9 3B 00 E9 38 00 8B 46  FC C4 5E 0C 26 89 07 FF   .;..8..F ..^.&...
30A0:  76 FC FF 76 08 FF 76 06  9A CD 24 25 00 83 C4 06   v..v..v. ..$%....
30B0:  C4 5E 10 26 89 07 C4 5E  10 26 83 3F FF 74 03 E9   .^.&...^ .&.?.t..
30C0:  06 00 B8 FF FF E9 06 00  B8 00 00 E9 00 00 5E 5F   ........ ......^_
30D0:  8B E5 5D CB 55 8B EC 81  EC 02 00 57 56 C4 5E 0E   ..].U... ...WV.^.
30E0:  26 8B 07 89 46 FE C4 5E  12 26 FF 37 C4 5E 0E 26   &...F..^ .&.7.^.&
30F0:  FF 37 FF 76 08 FF 76 06  9A B5 1F 0A 06 83 C4 08   .7.v..v. ........
3100:  3D 00 00 75 03 E9 06 00  B8 01 00 E9 29 00 FF 76   =..u.... ....)..v
3110:  14 FF 76 12 FF 76 10 FF  76 0E FF 76 FE FF 76 0C   ..v..v.. v..v..v.
3120:  FF 76 0A 9A EA 2B 25 00  83 C4 0E 40 74 03 E9 B5   .v...+%. ...@t...
3130:  FF B8 00 00 E9 00 00 5E  5F 8B E5 5D CB 55 8B EC   .......^ _..].U..
3140:  81 EC 04 00 57 56 8B 46  0A 89 46 FC B8 1A 00 F7   ....WV.F ..F.....
3150:  6E FC 8B F0 C4 5E 06 26  8B 40 14 89 46 FC 83 7E   n....^.& .@..F..~
3160:  FC FF 75 03 E9 0B 00 8B  46 0A 39 46 FC 74 03 E9   ..u..... F.9F.t..
```

```
3170:  03 00 E9 5F 00 8B 46 0C  39 46 FC 74 03 E9 06 00   ..._..F. 9F.t....
3180:  B8 01 00 E9 9D 00 FF 76  FC FF 76 08 FF 76 06 9A   .......v ..v..v..
3190:  CD 24 25 00 83 C4 06 89  46 FE 8B 46 0C 39 46 FE   .$%..... F..F.9F.
31A0:  74 03 E9 06 00 B8 01 00  E9 78 00 B8 00 00 50 FF   t....... .x....P.
31B0:  76 0C FF 76 FE FF 76 08  FF 76 06 9A ED 2C 25 00   v..v..v. .v...,%.
31C0:  83 C4 0A 3D 00 00 75 03  E9 06 00 B8 01 00 E9 52   ...=..u. .......R
31D0:  00 E9 78 FF 83 7E 0E 00  75 03 E9 40 00 FF 76 0A   ..x..~.. u..@..v.
31E0:  FF 76 08 FF 76 06 9A CD  24 25 00 83 C4 06 89 46   .v..v... $%.....F
31F0:  FC 8B 46 0C 39 46 FC 74  03 E9 06 00 B8 01 00 E9   ..F.9F.t ........
3200:  21 00 B8 00 00 50 FF 76  0C FF 76 FC FF 76 08 FF   !....P.v ..v..v..
3210:  76 06 9A ED 2C 25 00 83  C4 0A E9 06 00 B8 00 00   v...,%.. ........
3220:  E9 00 00 5E 5F 8B E5 5D  CB 55 8B EC 81 EC 08 00   ...^_..] .U......
3230:  57 56 B8 00 00 89 46 F8  89 46 FE 89 46 FC B8 1A   WV....F. .F..F...
3240:  00 F7 6E 06 8B D8 8E 06  06 0B 26 C4 36 7C C9 26   ..n..... ..&.6|.&
3250:  8B 40 14 89 46 FA 8B 46  06 A3 4E 0D C7 06 4A 0D   .@..F..F ..N...J.
3260:  FF FF C7 06 4C 0D FF FF  C7 06 48 0D FF FF 83 7E   ....L... ..H....~
3270:  FA FF 75 03 E9 C7 00 8B  46 FA 39 46 06 75 03 E9   ..u..... F.9F.u..
3280:  BC 00 B8 1A 00 F7 6E FA  8B D8 8E 06 06 0B 26 C4   ......n. ......&.
3290:  36 7C C9 26 8A 40 18 25  60 00 B1 05 D3 E8 E9 6C   6|.&.@.% `......l
32A0:  00 FF 46 FE 83 7E FE 01  7F 03 E9 0E 00 FF 76 FA   ..F..~.. ......v.
32B0:  9A A9 30 25 00 83 C4 02  E9 06 00 8B 46 FA A3 4E   ..0%.... ....F..N
32C0:  0D E9 5F 00 FF 46 FC 83  7E FC 01 7F 03 E9 0E 00   .._..F.. ~.......
32D0:  FF 76 FA 9A A9 30 25 00  83 C4 02 E9 06 00 8B 46   .v...0%. .......F
32E0:  FA A3 4E 0D E9 3C 00 FF  46 F8 83 7E F8 01 7F 03   ..N..<.. F..~....
32F0:  E9 0E 00 FF 76 FA 9A A9  30 25 00 83 C4 02 E9 06   ....v... 0%......
3300:  00 8B 46 FA A3 4E 0D E9  19 00 E9 16 00 0B C0 75   ..F..N.. .......u
3310:  03 E9 8D FF 48 75 03 E9  CD FF 48 75 03 E9 A4 FF   ....Hu.. ..Hu....
3320:  E9 00 00 B8 1A 00 F7 6E  FA 8B D8 8E 06 06 0B 26   .......n .......&
3330:  C4 36 7C C9 26 8B 40 14  89 46 FA E9 30 FF 83 7E   .6|.&.@. .F..0..~
3340:  FE 01 7E 03 E9 12 00 83  7E FC 01 7E 03 E9 09 00   ..~..... ~..~....
3350:  83 7E F8 01 7F 03 E9 94  01 C4 5E 08 26 8B 07 8E   .~...... ..^.&...
3360:  06 02 0B 26 39 06 2C 00  74 03 E9 06 00 B8 FF FF   ...&9.,. t.......
3370:  E9 80 01 A1 48 0D 39 06  4C 0D 75 03 E9 1C 00 B8   ....H.9. L.u.....
3380:  1A 00 F7 2E 4C 0D 8B D8  8E 06 06 0B 26 C4 36 7C   ....L... ....&.6|
3390:  C9 A1 48 0D 26 89 40 14  E9 18 00 B8 1A 00 F7 2E   ..H.&.@. ........
33A0:  4C 0D 8B D8 8E 06 06 0B  26 C4 36 7C C9 26 C7 40   L....... &.6|.&.@
33B0:  14 FF FF B8 1A 00 F7 6E  06 8B D8 8E 06 06 0B 26   .......n .......&
33C0:  C4 36 7C C9 8B 46 06 26  39 40 14 74 03 E9 17 00   .6|..F.& 9@.t....
33D0:  B8 1A 00 F7 6E 06 8B D8  8E 06 06 0B 26 C4 36 7C   ....n... ....&.6|
33E0:  C9 26 C7 40 14 FF FF B8  1A 00 F7 2E 48 0D 8B D8   .&.@.... ....H...
33F0:  8E 06 06 0B 26 C4 36 7C  C9 26 8A 40 18 25 60 00   ....&.6| .&.@.%`.
3400:  B1 05 D3 E8 48 A3 52 0D  83 3E 52 0D FF 7C 03 E9   ....H.R. .>R..|..
3410:  05 00 83 06 52 0D 03 83  3E 52 0D 01 7F 03 E9 05   ....R... >R......
3420:  00 83 2E 52 0D 03 83 3E  52 0D 00 74 03 E9 28 00   ...R...> R..t..(.
3430:  B8 01 00 50 B8 00 00 50  FF 36 48 0D 8E 06 06 0B   ...P...P .6H.....
3440:  26 FF 36 7E C9 26 FF 36  7C C9 9A 4A 22 25 00 83   &.6~.&.6 |..J"%..
3450:  C4 0A A3 50 0D E9 78 00  B8 01 00 50 FF 36 48 0D   ...P..x. ...P.6H.
3460:  8E 06 06 0B 26 FF 36 7E  C9 26 FF 36 7C C9 9A DF   ....&.6~ .&.6|...
3470:  27 25 00 83 C4 08 A3 50  0D 83 3E 50 0D FF 74 03   '%.....P ..>P..t.
3480:  E9 28 00 B8 01 00 50 FF  36 52 0D FF 36 48 0D 8E   .(....P. 6R..6H..
3490:  06 06 0B 26 FF 36 7E C9  26 FF 36 7C C9 9A 4A 22   ...&.6~. &.6|..J"
34A0:  25 00 83 C4 0A A3 50 0D  E9 25 00 B8 01 00 50 B8   %.....P. .%....P.
34B0:  00 00 50 FF 36 50 0D 8E  06 06 0B 26 FF 36 7E C9   ..P.6P.. ...&.6~.
```

```
34C0:  26 FF 36 7C C9 9A 4A 22  25 00 83 C4 0A A3 50 0D   &.6|..J" %.....P.
34D0:  A1 50 0D C4 5E 08 26 8B  37 D1 E6 8E 06 04 0B 26   .P..^.&. 7......&
34E0:  C4 1E DA DF 26 89 00 C4  5E 08 26 FF 07 B8 00 00   ....&... ^.&.....
34F0:  E9 00 00 5E 5F 8B E5 5D  CB 55 8B EC 81 EC 00 00   ...^_..] .U......
3500:  57 56 8B 46 06 A3 4C 0D  83 3E 48 0D FF 74 03 E9   WV.F..L. .>H..t..
3510:  0F 00 A1 4C 0D A3 4A 0D  A1 4C 0D A3 48 0D E9 1F   ...L..J. .L..H...
3520:  00 B8 1A 00 F7 2E 4A 0D  8B D8 8E 06 06 0B 26 C4   ......J. ......&.
3530:  36 7C C9 A1 4C 0D 26 89  40 14 A1 4C 0D A3 4A 0D   6|..L.&. @..L..J.
3540:  B8 1A 00 F7 6E 06 8B D8  8E 06 06 0B 26 C4 36 7C   ....n... ....&.6|
3550:  C9 26 8B 40 14 8B C8 B8  1A 00 F7 2E 4E 0D 8B D8   .&.@.... ....N...
3560:  8E 06 06 0B 26 C4 36 7C  C9 26 89 48 14 5E 5F 8B   ....&.6| .&.H.^_.
3570:  E5 5D CB 55 8B EC 81 EC  00 00 57 56 8E 06 F8 0A   .].U.... ..WV....
3580:  26 A1 00 00 8E 06 00 0B  26 A3 6E 08 8E 06 F8 0A   &....... &.n.....
3590:  26 A1 02 00 8E 06 00 0B  26 A3 70 08 26 A1 6E 08   &....... &.p.&.n.
35A0:  40 D1 E0 50 B8 24 00 B9  62 23 51 50 B8 92 08 06   @..P.$.. b#QP....
35B0:  50 9A 28 2B AF 0D 83 C4  0A B8 1A 00 8E 06 00 0B   P.(+.... ........
35C0:  26 F7 2E 70 08 50 B8 0C  04 B9 62 23 51 50 B8 7A   &..p.P.. ..b#QP.z
35D0:  0C 06 50 9A 28 2B AF 0D  83 C4 0A 5E 5F 8B E5 5D   ..P.(+.. ...^_..]
35E0:  CB 55 8B EC 81 EC 02 00  57 56 FF 76 06 9A 00 00   .U...... WV.v....
35F0:  DC 0C 83 C4 02 89 46 FE  40 74 03 E9 06 00 B8 FF   ......F. @t......
3600:  FF E9 E4 00 B8 1A 00 50  8E 06 F8 0A 26 FF 36 02   .......P ....&.6.
3610:  00 9A 4E 29 AF 0D 83 C4  04 8E 06 FE 0A 26 A3 58   ..N).... .....&.X
3620:  08 26 89 16 5A 08 26 A1  5A 08 26 0B 06 58 08 74   .&..Z.&. Z.&..X.t
3630:  03 E9 06 00 B8 FF FF E9  AE 00 B8 02 00 50 8E 06   ........ .....P..
3640:  F8 0A 26 FF 36 00 00 9A  4E 29 AF 0D 83 C4 04 8E   ..&.6... N)......
3650:  06 FC 0A 26 A3 68 08 26  89 16 6A 08 26 A1 6A 08   ...&.h.& ..j.&.j.
3660:  26 0B 06 68 08 74 03 E9  2A 00 8E 06 FE 0A 26 FF   &..h.t.. *.....&.
3670:  36 5A 08 26 FF 36 58 08  9A C4 22 AF 0D 83 C4 04   6Z.&.6X. ..".....
3680:  8E 06 FE 0A 2B C0 26 A3  5A 08 26 A3 58 08 B8 FF   ....+.&. Z.&.X...
3690:  FF E9 54 00 B8 1A 00 8E  06 F8 0A 26 F7 2E 02 00   ..T..... ...&....
36A0:  50 B8 0C 04 06 50 8E 06  FE 0A 26 FF 36 5A 08 26   P....P.. ..&.6Z.&
36B0:  FF 36 58 08 9A 28 2B AF  0D 83 C4 0A 8E 06 F8 0A   .6X..(+. ........
36C0:  26 A1 00 00 D1 E0 50 B8  24 00 06 50 8E 06 FC 0A   &.....P. $..P....
36D0:  26 FF 36 6A 08 26 FF 36  68 08 9A 28 2B AF 0D 83   &.6j.&.6 h..(+...
36E0:  C4 0A B8 00 00 E9 00 00  5E 5F 8B E5 5D CB 55 8B   ........ ^_..].U.
36F0:  EC 81 EC 00 00 57 56 8E  06 FE 0A 26 A1 5A 08 26   .....WV. ...&.Z.&
3700:  0B 06 58 08 75 03 E9 12  00 26 FF 36 5A 08 26 FF   ..X.u... .&.6Z.&.
3710:  36 58 08 9A C4 22 AF 0D  83 C4 04 8E 06 FE 0A 2B   6X...".. .......+
3720:  C0 26 A3 5A 08 26 A3 58  08 8E 06 FC 0A 26 A1 6A   .&.Z.&.X .....&.j
3730:  08 26 0B 06 68 08 75 03  E9 12 00 26 FF 36 6A 08   .&..h.u. ...&.6j.
3740:  26 FF 36 68 08 9A C4 22  AF 0D 83 C4 04 8E 06 FC   &.6h..." ........
3750:  0A 2B C0 26 A3 6A 08 26  A3 68 08 5E 5F 8B E5 5D   .+.&.j.& .h.^_..]
3760:  CB 55 8B EC 81 EC 00 00  57 56 5E 5F 8B E5 5D CB   .U...... WV^_..].
3770:  55 8B EC 81 EC 00 00 57  56 5E 5F 8B E5 5D CB 55   U......W V^_..].U
3780:  8B EC 81 EC 00 00 57 56  5E 5F 8B E5 5D CB 55 8B   ......WV ^_..].U.
3790:  EC 81 EC 04 00 57 56 C7  46 FE 00 00 E9 03 00 FF   .....WV. F.......
37A0:  46 FE 81 7E FE DC 05 7C  03 E9 41 00 C7 46 FC 00   F..~...| ..A..F..
37B0:  00 E9 03 00 FF 46 FC 83  7E FC 02 7E 03 E9 2A 00   .....F.. ~..~..*.
37C0:  B8 1A 00 F7 6E FE 8B 76  FC 8B CE D1 E6 03 F1 D1   ....n..v ........
37D0:  E6 03 F0 C4 5E 06 B8 AA  14 1E 8D B8 10 04 BE 2E   ....^... ........
37E0:  00 8E D8 A5 A5 A5 1F E9  CA FF E9 B2 FF 5E 5F 8B   ........ .....^_.
37F0:  E5 5D CB 00 55 8B EC 81  EC 22 00 57 56 8D 46 EE   .]..U... .".WV.F.
3800:  16 50 8D 4E F4 16 51 9A  FD 05 5B 0C 83 C4 08 8B   .P.N..Q. ..[.....
```

```
3810:  46 F4 B9 0A 00 99 F7 F9  A3 54 0D 8B 46 EE 99 F7   F....... .T..F...
3820:  F9 A3 56 0D 8B 46 F4 D1  F8 A3 58 0D 8B 46 EE BB   ..V..F.. ..X..F..
3830:  03 00 99 F7 FB A3 5A 0D  B8 0A 00 99 F7 3E D4 00   ......Z. .....>..
3840:  89 46 DE B8 1E 00 99 F7  3E D4 00 89 46 E2 8E 06   .F...... >...F...
3850:  08 0B 26 C7 06 50 EB 00  00 B8 00 00 8E 06 0A 0B   ..&..P.. ........
3860:  26 A3 FA C7 8E 06 0C 0B  26 A3 38 C1 B8 00 00 8E   &....... &.8.....
3870:  06 08 0B 26 A3 46 EB 26  A3 4A EB 26 C7 06 4E EB   ...&.F.& .J.&..N.
3880:  00 00 26 C7 06 4C EB 64  00 A1 54 0D D1 F8 8E 06   ..&..L.d ..T.....
3890:  0E 0B 26 A3 8C BF A1 56  0D D1 F8 8E 06 10 0B 26   ..&....V .......&
38A0:  A3 16 C0 A1 58 0D 8E 06  12 0B 26 A3 66 08 A1 5A   ....X... ..&.f..Z
38B0:  0D 8E 06 14 0B 26 A3 6C  08 9A 65 0E 5F 03 8D 46   .....&.l ..e._..F
38C0:  F0 16 50 8D 46 F6 16 50  8D 46 E8 16 50 8D 46 EA   ..P.F..P .F..P.F.
38D0:  16 50 9A 9C 00 DE 09 83  C4 10 8E 06 08 0B 26 A3   .P...... ......&.
38E0:  44 EB 9A 9B 02 5F 03 8E  06 08 0B 26 83 3E 48 EB   D...._.. ...&.>H.
38F0:  00 74 03 E9 05 00 26 FF  06 48 EB 8E 06 08 0B 26   .t....&. .H.....&
3900:  83 3E 48 EB 03 7F 03 E9  5D 00 B8 05 00 50 B8 62   .>H..... ]....P.b
3910:  0D 1E 50 B8 50 00 50 B8  A0 00 50 B8 04 EA B9 AA   ..P.P.P. ..P.....
3920:  14 51 50 9A 31 0D 5F 03  83 C4 0E A3 5C 0D FF 36   .QP.1._. ....\..6
3930:  56 0D FF 36 54 0D B8 00  00 50 50 B8 60 0D 1E 50   V..6T... .PP.`..P
3940:  B8 5E 0D 1E 50 FF 76 DE  B8 CA D1 B9 62 23 51 50   .^..P.v. ....b#QP
3950:  9A B5 22 5F 03 83 C4 16  8E 06 08 0B 26 A3 4A EB   .."_.... ....&.J.
3960:  26 A1 4A EB 89 46 E6 8E  06 08 0B 26 FF 36 4A EB   &.J..F.. ...&.6J.
3970:  9A 92 00 14 0B 83 C4 02  3D 00 00 75 03 E9 24 00   ........ =..u..$.
3980:  8D 46 E0 16 50 8D 46 E4  16 50 8D 46 FC 16 50 8D   .F..P.F. .P.F..P.
3990:  46 FE 16 50 9A A4 0E 5F  03 83 C4 10 8E 06 08 0B   F..P..._ ........
39A0:  26 A3 50 EB 8E 06 08 0B  26 83 3E 50 EB 00 75 03   &.P..... &.>P..u.
39B0:  E9 14 00 FF 76 E0 FF 76  E4 FF 76 FC FF 76 FE 9A   ....v..v ..v..v..
39C0:  21 15 5F 03 83 C4 08 8E  06 08 0B 26 83 3E 44 EB   !._..... ...&.>D.
39D0:  01 7F 03 E9 A4 00 B8 1A  00 F7 6E F6 8B D8 8E 06   ........ ..n.....
39E0:  16 0B 26 8B 87 0C 04 8B  C8 B8 1A 00 F7 6E EA 8B   ..&..... .....n..
39F0:  D8 8E 06 18 0B 26 2B 8F  7A 0C 89 4E F2 B8 1A 00   .....&+. z..N....
3A00:  F7 6E F6 8B D8 8E 06 16  0B 26 8B 87 0E 04 8B C8   .n...... .&......
3A10:  B8 1A 00 F7 6E EA 8B D8  8E 06 18 0B 26 2B 8F 7C   ....n... ....&+.|
3A20:  0C 89 4E EC 8E 06 08 0B  26 83 3E 50 EB 00 75 03   ..N..... &.>P..u.
3A30:  E9 47 00 A1 5E 0D 2B 46  F2 99 52 50 52 50 9A 5E   .G..^.+F ..RPRP.^
3A40:  2D AF 0D 8B C8 A1 60 0D  2B 46 EC 8B DA 99 52 50   -.....`. +F....RP
3A50:  52 50 8B F1 8B FB 9A 5E  2D AF 0D 03 F0 13 FA 57   RP.....^ -......W
3A60:  56 9A 22 01 B1 09 83 C4  04 3D 14 00 7E 03 E9 09   V."..... .=..~...
3A70:  00 8E 06 08 0B 26 FF 06  50 EB 8E 06 08 0B 26 A1   .....&.. P.....&.
3A80:  50 EB E9 00 00 5E 5F 8B  E5 5D CB 55 8B EC 81 EC   P....^_. .].U....
3A90:  34 00 57 56 C7 46 F2 01  00 8E 06 08 0B 26 C7 06   4.WV.F.. .....&..
3AA0:  48 EB 00 00 26 C7 06 46  EB 00 00 C7 46 D2 00 00   H...&..F ....F...
3AB0:  E9 03 00 FF 46 D2 8E 06  18 0B 8B 46 D2 26 39 06   ....F... ...F.&9.
3AC0:  6E 08 7F 03 E9 54 0A 8B  5E D2 D1 E3 26 8B 87 92   n....T.. ^...&...
3AD0:  08 89 46 E6 83 7E E6 FF  75 03 E9 3B 0A FF 76 E6   ..F..~.. u..;..v.
3AE0:  B8 7A 0C B9 AA 14 51 50  9A 0C 00 AA 08 83 C4 06   .z....QP ........
3AF0:  89 46 E6 83 7E E6 FF 75  03 E9 19 0A B8 1A 00 F7   .F..~..u ........
3B00:  6E E6 8B D8 8E 06 18 0B  26 8B 87 84 0C 89 46 EC   n....... &.....F.
3B10:  B8 1A 00 F7 6E E6 8B D8  26 8B 87 88 0C 89 46 E0   ....n... &.....F.
3B20:  83 7E E0 28 7E 03 E9 03  00 E9 A8 FF B8 1A 00 F7   .~.(~... ........
3B30:  6E EC 8B D8 8E 06 18 0B  8B 46 E6 26 39 87 84 0C   n....... .F.&9...
3B40:  74 03 E9 06 00 B8 01 00  E9 22 00 B8 1A 00 F7 6E   t....... ."......n
3B50:  EC 8B D8 8E 06 18 0B 8B  46 E6 26 39 87 7E 0C 74   ........ F.&9.~.t
```

```
3B60:  03 E9 06 00 B8 00 00 E9  03 00 B8 02 00 89 46 E4   ........ ......F.
3B70:  83 7E F2 00 75 03 E9 1B  01 B8 00 00 89 46 DE 89   .~..u... .....F..
3B80:  46 DC B8 1A 00 F7 6E EC  8B D8 8E 06 18 0B 26 F6   F.....n. ......&.
3B90:  87 92 0C 01 74 03 E9 18  00 B8 1A 00 F7 6E E6 8B   ....t... .....n..
3BA0:  D8 26 F6 87 92 0C 01 74  03 E9 05 00 C7 46 DC 01   .&.....t .....F..
3BB0:  00 B8 1A 00 F7 6E E6 8B  D8 8E 06 18 0B B8 1A 00   .....n.. ........
3BC0:  F7 6E EC 8B F0 26 8B 84  7A 0C 26 2B 87 7A 0C 99   .n...&.. z.&+.z..
3BD0:  52 50 52 50 9A 5E 2D AF  0D 8B C8 B8 1A 00 8B DA   RPRP.^-. ........
3BE0:  F7 6E E6 8B F0 8E 06 18  0B B8 1A 00 F7 6E EC 8B   .n...... .....n..
3BF0:  F8 26 8B 85 7C 0C 26 2B  84 7C 0C 99 52 50 52 50   .&..|.&+ .|..RPRP
3C00:  8B F1 8B FB 9A 5E 2D AF  0D 03 F0 13 FA 57 56 9A   .....^-. .....WV.
3C10:  22 01 B1 09 83 C4 04 89  46 FE 83 7E DC 00 74 03   "....... F..~..t.
3C20:  E9 71 00 B8 1A 00 8E 06  0A 0B 26 F7 2E FA C7 8B   .q...... ..&.....
3C30:  D8 8E 06 1A 0B 8B 46 EC  26 89 87 96 D4 B8 1A 00   ......F. &.......
3C40:  8E 06 0A 0B 26 F7 2E FA  C7 8B D8 8E 06 1A 0B 8B   ....&... ........
3C50:  46 E6 26 89 87 98 D4 B8  1A 00 8E 06 0A 0B 26 F7   F.&..... ......&.
3C60:  2E FA C7 8B D8 8E 06 1A  0B 8B 46 E4 26 89 87 9C   ........ ..F.&...
3C70:  D4 8E 06 0A 0B 26 FF 06  FA C7 26 81 3E FA C7 C8   .....&.. ..&.>...
3C80:  00 7D 03 E9 05 00 C7 46  F2 00 00 8E 06 0C 0B 26   .}.....F .......&
3C90:  FF 06 38 C1 C7 46 D8 00  00 E9 03 00 FF 46 D8 8E   ..8..F.. .....F..
3CA0:  06 16 0B 8B 46 D8 26 39  06 02 00 7F 03 E9 31 08   ....F.&9 ......1.
3CB0:  8B 5E D8 8B C3 D1 E3 03  D8 D1 E3 26 8B 87 68 9C   .^...... ...&..h.
3CC0:  89 46 FA B8 1A 00 F7 6E  FA 8B D8 26 8B 87 0C 04   .F.....n ...&....
3CD0:  8B C8 B8 1A 00 F7 6E EC  8B D8 8E 06 18 0B 26 2B   ......n. ......&+
3CE0:  8F 7A 0C 89 4E EE 8E 06  12 0B 26 A1 66 08 F7 D8   .z..N... ..&.f...
3CF0:  3B 46 EE 7D 03 E9 03 00  E9 A1 FF 8E 06 12 0B 8B   ;F.}.... ........
3D00:  46 EE 26 39 06 66 08 7E  03 E9 03 00 E9 D2 07 B8   F.&9.f.~ ........
3D10:  1A 00 F7 6E FA 8B D8 8E  06 16 0B 26 8B 87 0E 04   ...n.... ...&....
3D20:  8B C8 B8 1A 00 F7 6E EC  8B D8 8E 06 18 0B 26 2B   ......n. ......&+
3D30:  8F 7C 0C 89 4E E8 FF 76  E8 9A 32 2C AF 0D 83 C4   .|..N..v ..2,....
3D40:  02 8E 06 14 0B 26 3B 06  6C 08 7D 03 E9 03 00 E9   .....&;. l.}.....
3D50:  4A FF C7 46 D0 01 00 C7  46 F8 00 00 C7 46 D6 00   J..F.... F....F..
3D60:  00 C7 46 D4 00 00 E9 03  00 FF 46 D4 83 7E D4 03   ..F..... ..F..~..
3D70:  7C 03 E9 69 07 B8 1A 00  F7 6E FA 8B D8 8B 46 D4   |..i.... .n....F.
3D80:  8B C8 D1 E0 03 C1 D1 E0  03 D8 8E 06 16 0B 26 8B   ........ ......&.
3D90:  87 10 04 89 46 F4 83 7E  F4 FF 74 03 E9 03 00 E9   ....F..~ ..t.....
3DA0:  C7 FF B8 1A 00 F7 6E F4  8B D8 8E 06 16 0B 26 8B   ......n. ......&.
3DB0:  87 0C 04 8B C8 B8 1A 00  F7 6E E6 8B D8 8E 06 18   ........ .n......
3DC0:  0B 26 2B 8F 7A 0C 89 4E  EA FF 76 EA 9A 32 2C AF   .&+.z..N ..v..2,.
3DD0:  0D 83 C4 02 8E 06 12 0B  26 3B 06 66 08 7D 03 E9   ........ &;.f.}..
3DE0:  03 00 E9 84 FF B8 1A 00  F7 6E F4 8B D8 8E 06 16   ........ .n......
3DF0:  0B 26 8B 87 0E 04 8B C8  B8 1A 00 F7 6E E6 8B D8   .&...... ....n...
3E00:  8E 06 18 0B 26 2B 8F 7C  0C 89 4E E2 FF 76 E2 9A   ....&+.| ..N..v..
3E10:  32 2C AF 0D 83 C4 02 8E  06 14 0B 26 3B 06 6C 08   2,...... ...&;.l.
3E20:  7D 03 E9 03 00 E9 41 FF  B8 1A 00 F7 6E FA 8B D8   }.....A. ....n...
3E30:  8B 46 D4 8B C8 D1 E0 03  C1 D1 E0 03 D8 8E 06 16   .F...... ........
3E40:  0B 26 83 BF 14 04 28 7C  03 E9 06 00 B8 01 00 E9   .&....(| ........
3E50:  03 00 B8 00 00 50 9A 32  2C AF 0D 83 C4 02 3D 00   .....P.2 ,.....=.
3E60:  00 75 03 E9 03 00 E9 00  FF C7 46 F8 00 00 B8 1A   .u...... ..F.....
3E70:  00 F7 6E F4 8B D8 8E 06  16 0B B8 1A 00 F7 6E FA   ..n..... ......n.
3E80:  8B F0 26 8B 84 0C 04 26  2B 87 0C 04 99 52 50 52   ..&....& +....RPR
3E90:  50 9A 5E 2D AF 0D 8B C8  B8 1A 00 8B DA F7 6E F4   P.^-.... ......n.
3EA0:  8B F0 8E 06 16 0B B8 1A  00 F7 6E FA 8B F8 26 8B   ........ ..n...&.
```

```
3EB0:  85 0E 04 26 2B 84 0E 04  99 52 50 52 50 8B F1 8B   ...&+... .RPRP...
3EC0:  FB 9A 5E 2D AF 0D 03 F0  13 FA 57 56 9A 22 01 B1   ..^-.... ..WV."..
3ED0:  09 83 C4 04 89 46 CE 8B  46 CE 2B 46 FE 50 9A 32   .....F.. F.+F.P.2
3EE0:  2C AF 0D 83 C4 02 89 46  CC B8 14 00 F7 6E FE B9   ,......F .....n..
3EF0:  64 00 99 F7 F9 3B 46 CC  7C 03 E9 2F 00 B8 1A 00   d....;F. |../....
3F00:  F7 6E EC 8B D8 8E 06 18  0B 26 F6 87 92 0C 01 75   .n...... .&.....u
3F10:  03 E9 18 00 B8 1A 00 F7  6E E6 8B D8 26 F6 87 92   ........ n...&...
3F20:  0C 01 75 03 E9 05 00 C7  46 D0 00 00 B8 1A 00 F7   ..u..... F.......
3F30:  6E FA 8B D8 8B 46 D4 8B  C8 D1 E0 03 C1 D1 E0 03   n....F.. ........
3F40:  D8 8E 06 16 0B 26 8B 87  14 04 2B 46 E0 50 9A 32   .....&.. ..+F.P.2
3F50:  2C AF 0D 83 C4 02 8B 4E  EE 2B 4E EA 51 8B F0 9A   ,......N .+N.Q...
3F60:  32 2C AF 0D 83 C4 02 8B  4E E8 2B 4E E2 51 8B F8   2,...... N.+N.Q..
3F70:  9A 32 2C AF 0D 83 C4 02  03 F8 03 F7 83 FE 3C 7F   .2,..... ......<.
3F80:  03 E9 03 00 E9 E2 FD B8  1A 00 F7 6E F4 8B D8 8E   ........ ...n....
3F90:  06 16 0B 8B 46 FA 26 39  87 16 04 74 03 E9 06 00   ....F.&9 ...t....
3FA0:  B8 01 00 E9 22 00 B8 1A  00 F7 6E F4 8B D8 8E 06   ...."... ..n.....
3FB0:  16 0B 8B 46 FA 26 39 87  10 04 74 03 E9 06 00 B8   ...F.&9. ..t.....
3FC0:  00 00 E9 03 00 B8 02 00  89 46 F0 B8 1A 00 F7 6E   ........ .F.....n
3FD0:  F4 8B D8 8B 46 F0 8B C8  D1 E0 03 C1 D1 E0 03 D8   ....F... ........
3FE0:  8E 06 16 0B 26 8B 87 12  04 8B C8 B8 1A 00 F7 6E   ....&... .......n
3FF0:  E6 8B D8 8E 06 18 0B 26  2B 8F 86 0C 89 4E F6 81   .......& +....N..
4000:  7E F6 B4 00 7F 03 E9 08  00 81 6E F6 68 01 E9 12   ~....... ..n.h...
4010:  00 81 7E F6 4C FF 7D 03  E9 03 00 E9 05 00 81 46   ..~.L.}. .......F
4020:  F6 68 01 B8 1A 00 F7 6E  FA 8B D8 8B 46 D4 8B C8   .h.....n ....F...
4030:  D1 E0 03 C1 D1 E0 03 D8  8E 06 16 0B 26 8B 87 12   ........ ....&...
4040:  04 8B C8 B8 1A 00 F7 6E  EC 8B 5E E4 8B D3 D1 E3   .......n ..^.....
4050:  03 DA D1 E3 03 D8 8E 06  18 0B 26 2B 8F 80 0C 89   ........ ..&+....
4060:  4E FC 81 7E FC B4 00 7F  03 E9 08 00 81 6E FC 68   N..~.... .....n.h
4070:  01 E9 12 00 81 7E FC 4C  FF 7D 03 E9 03 00 E9 05   .....~.L .}......
4080:  00 81 46 FC 68 01 FF 76  FC 9A 32 2C AF 0D 83 C4   ..F.h..v ..2,....
4090:  02 3D 12 00 7F 03 E9 03  00 E9 CD FC FF 76 F6 9A   .=...... .....v..
40A0:  32 2C AF 0D 83 C4 02 3D  12 00 7F 03 E9 05 00 C7   2,.....= ........
40B0:  46 D0 00 00 B8 1A 00 F7  6E E6 8B D8 8E 06 18 0B   F....... n.......
40C0:  26 FF B7 7C 0C B8 1A 00  F7 6E E6 8B D8 26 FF B7   &..|.... .n...&..
40D0:  7A 0C B8 1A 00 F7 6E EC  8B D8 26 FF B7 7C 0C B8   z.....n. ..&..|..
40E0:  1A 00 F7 6E EC 8B D8 26  FF B7 7A 0C B8 1A 00 F7   ...n...& ..z.....
40F0:  6E F4 8B D8 8E 06 16 0B  26 FF B7 0E 04 B8 1A 00   n....... &.......
4100:  F7 6E F4 8B D8 26 FF B7  0C 04 B8 1A 00 F7 6E FA   .n...&.. ......n.
4110:  8B D8 26 FF B7 0E 04 B8  1A 00 F7 6E FA 8B D8 26   ..&..... ...n...&
4120:  FF B7 0C 04 9A 8E 01 AA  08 83 C4 10 89 46 DA FF   ........ .....F..
4130:  76 DA 9A 32 2C AF 0D 83  C4 02 3D 12 00 7F 03 E9   v..2,... ..=.....
4140:  03 00 E9 24 FC 8B 46 F6  2B 46 FC 50 9A 32 2C AF   ...$..F. +F.P.2,.
4150:  0D 83 C4 02 3D 12 00 7F  03 E9 05 00 C7 46 D0 00   ....=... .....F..
4160:  00 B8 1A 00 F7 6E FA 8B  D8 8E 06 16 0B 26 F6 87   .....n.. .....&..
4170:  24 04 10 75 03 E9 45 00  B8 1A 00 F7 6E FA 8B D8   $..u..E. ....n...
4180:  26 F6 87 24 04 01 75 03  E9 32 00 B8 1A 00 F7 6E   &..$..u. .2.....n
4190:  EC 8B D8 8E 06 18 0B 26  F6 87 92 0C 10 75 03 E9   .......& .....u..
41A0:  1B 00 B8 1A 00 F7 6E EC  8B D8 26 F6 87 92 0C 01   ......n. ..&.....
41B0:  75 03 E9 08 00 C7 46 F8  02 00 E9 05 00 C7 46 F8   u.....F. ......F.
41C0:  01 00 83 7E D0 00 74 03  E9 03 00 FF 4E F8 83 7E   ...~..t. ....N..~
41D0:  F8 00 7F 03 E9 77 00 8B  46 F8 8E 06 1C 0B 8B 5E   .....w.. F......^
41E0:  FC D1 E3 26 01 87 A4 EA  8B 46 E8 99 F7 3E D4 00   ...&.... .F...>..
41F0:  8E 06 10 0B 26 03 06 16  C0 8B C8 D1 E0 D1 E0 03   ....&... ........
```

```
4200:  C1 D1 E0 05 05 00 B9 0A  00 99 F7 F9 BB 3C 00 F7   ........ .....<..
4210:  EB 8B D8 8B 46 EE 99 F7  3E D4 00 8E 06 0E 0B 26   ....F... >......&
4220:  03 06 8C BF 8B D0 D1 E0  D1 E0 03 C2 D1 E0 05 05   ........ ........
4230:  00 99 F7 F9 03 D8 8E 06  1E 0B 8A 46 F8 26 00 87   ........ ...F.&..
4240:  CA D1 8B 46 F8 8E 06 08  0B 26 01 06 46 EB 83 7E   ...F.... .&..F..~
4250:  D0 00 75 03 E9 CC 00 B8  1A 00 F7 6E F4 8B D8 8E   ..u..... ...n....
4260:  06 16 0B 26 F6 87 24 04  10 75 03 E9 45 00 B8 1A   ...&..$. .u..E...
4270:  00 F7 6E F4 8B D8 26 F6  87 24 04 01 75 03 E9 32   ..n...&. .$..u..2
4280:  00 B8 1A 00 F7 6E E6 8B  D8 8E 06 18 0B 26 F6 87   .....n.. .....&..
4290:  92 0C 10 75 03 E9 1B 00  B8 1A 00 F7 6E E6 8B D8   ...u.... ....n...
42A0:  26 F6 87 92 0C 01 75 03  E9 08 00 C7 46 F8 02 00   &.....u. ....F...
42B0:  E9 05 00 C7 46 F8 01 00  83 7E DE 00 74 03 E9 0E   ....F... .~..t...
42C0:  00 8E 06 08 0B 26 FF 06  48 EB C7 46 DE 01 00 8B   .....&.. H..F....
42D0:  46 F8 8E 06 1C 0B 8B 5E  F6 D1 E3 26 01 87 A4 EA   F......^ ...&....
42E0:  8B 46 E2 99 F7 3E D4 00  8E 06 10 0B 26 03 06 16   .F...>.. ....&...
42F0:  C0 B9 3C 00 F7 E9 8B D8  8E 06 0E 0B 26 03 1E 8C   ..<..... ....&...
4300:  BF 8B 46 EA 99 F7 3E D4  00 03 D8 8E 06 1E 0B 8A   ..F...>. ........
4310:  46 F8 26 00 87 CA D1 8B  46 F8 8E 06 08 0B 26 01   F.&..... F.....&.
4320:  06 46 EB 83 7E F2 00 75  03 E9 AF 01 83 7E D0 00   .F..~..u .....~..
4330:  75 03 E9 A6 01 83 7E DC  00 74 03 E9 9D 01 B8 1A   u.....~. .t......
4340:  00 8E 06 0A 0B 26 F7 2E  FA C7 8B D8 8E 06 1A 0B   .....&.. ........
4350:  8B 46 FA 26 89 87 96 D4  B8 1A 00 8E 06 0A 0B 26   .F.&.... .......&
4360:  F7 2E FA C7 8B D8 8E 06  1A 0B 8B 46 F4 26 89 87   ........ ...F.&..
4370:  98 D4 B8 1A 00 8E 06 0A  0B 26 F7 2E FA C7 8B D8   ........ .&......
4380:  8E 06 1A 0B 8B 46 DA 26  89 87 AA D4 B8 1A 00 8E   .....F.& ........
4390:  06 0A 0B 26 F7 2E FA C7  8B D8 8E 06 1A 0B 8B 46   ...&.... .......F
43A0:  EE 26 89 87 9E D4 B8 1A  00 8E 06 0A 0B 26 F7 2E   .&...... .....&..
43B0:  FA C7 8B D8 8E 06 1A 0B  8B 46 EA 26 89 87 A0 D4   ........ .F.&....
43C0:  B8 1A 00 8E 06 0A 0B 26  F7 2E FA C7 8B D8 8E 06   .......& ........
43D0:  1A 0B 8B 46 E8 26 89 87  A2 D4 B8 1A 00 8E 06 0A   ...F.&.. ........
43E0:  0B 26 F7 2E FA C7 8B D8  8E 06 1A 0B 8B 46 CE 26   .&...... .....F.&
43F0:  89 87 AE D4 B8 1A 00 8E  06 0A 0B 26 F7 2E FA C7   ........ ...&....
4400:  8B D8 8E 06 1A 0B 8B 46  CC 26 89 87 AC D4 B8 1A   .......F .&......
4410:  00 8E 06 0A 0B 26 F7 2E  FA C7 8B D8 8E 06 1A 0B   .....&.. ........
4420:  8B 46 E2 26 89 87 A4 D4  B8 1A 00 8E 06 0A 0B 26   .F.&.... .......&
4430:  F7 2E FA C7 8B D8 8E 06  1A 0B 8B 46 FC 26 89 87   ........ ...F.&..
4440:  A6 D4 B8 1A 00 8E 06 0A  0B 26 F7 2E FA C7 8B D8   ........ .&......
4450:  8E 06 1A 0B 8B 46 F6 26  89 87 A8 D4 83 7E F0 01   .....F.& .....~..
4460:  74 03 E9 29 00 B8 1A 00  8E 06 0A 0B 26 F7 2E FA   t..).... ....&...
4470:  C7 8B D8 8E 06 1A 0B B8  FF FF 2B 46 D4 26 89 87   ........ ..+F.&..
4480:  9C D4 8E 06 0A 0B 26 FF  06 FA C7 E9 23 00 B8 1A   ......&. ....#...
4490:  00 8E 06 0A 0B 26 F7 2E  FA C7 8B D8 8E 06 1A 0B   .....&.. ........
44A0:  8B 46 F0 26 89 87 9C D4  8E 06 0A 0B 26 FF 06 FA   .F.&.... ....&...
44B0:  C7 8E 06 0A 0B 26 81 3E  FA C7 C8 00 7D 03 E9 1A   .....&.> ....}...
44C0:  00 C7 46 F2 00 00 B8 1A  00 26 F7 2E FA C7 8B D8   ..F..... .&......
44D0:  8E 06 1A 0B 26 C7 87 96  D4 FF FF E9 8B F8 E9 BB   ....&... ........
44E0:  F7 83 7E F2 00 75 03 E9  2B 00 83 7E DC 00 74 03   ..~..u.. +..~..t.
44F0:  E9 22 00 B8 1A 00 8E 06  0A 0B 26 F7 2E FA C7 8B   ."...... ..&.....
4500:  D8 8E 06 1A 0B 26 C7 87  96 D4 FF FF 8E 06 0A 0B   .....&.. ........
4510:  26 FF 06 FA C7 E9 BC F5  E9 98 F5 5E 5F 8B E5 5D   &....... ...^_..]
4520:  CB 55 8B EC 81 EC 12 00  57 56 C4 5E 0E 26 C7 07   .U...... WV.^.&..
4530:  00 00 C7 46 F8 00 00 8B  46 0A D1 F8 89 46 FC 8B   ...F.... F....F..
4540:  46 12 D1 E0 89 46 F6 8B  46 FC 2B 46 12 2B 46 0C   F....F.. F.+F.+F.
```

B_ENROLL.DMP                    Tuesday, July 13, 1993 1:12 pm                    Page 22

```
4550:  3D 00 00 7C 03 E9 03 00  B8 00 00 89 46 F2 8B 46   =..|.... ....F..F
4560:  F6 03 46 F2 3B 46 0A 7F  03 E9 03 00 8B 46 0A 89   ..F.;F.. .....F..
4570:  46 FA 8B 46 F2 89 46 EE  E9 03 00 FF 46 EE 8B 46   F..F..F. ....F..F
4580:  EE 39 46 FA 7F 03 E9 11  00 8B 5E EE D1 E3 C4 76   .9F..... ..^....v
4590:  06 26 8B 00 01 46 F8 E9  E1 FF 8B 46 12 01 46 F2   .&...F.. ...F..F.
45A0:  8B 46 0A 2B 46 12 8B 4E  0C 03 4E FC 3B C1 7F 03   .F.+F..N ..N.;...
45B0:  E9 02 00 8B C1 89 46 FA  8B 46 F2 89 46 F0 E9 03   ......F. .F..F...
45C0:  00 FF 46 F0 8B 46 FA 39  46 F0 7C 03 E9 74 00 8B   ..F..F.9 F.|..t..
45D0:  5E F0 2B 5E 12 D1 E3 C4  76 06 26 8B 00 8B 5E F0   ^.+^.... v.&...^.
45E0:  03 5E 12 D1 E3 C4 76 06  26 2B 00 F7 D8 01 46 F8   .^....v. &+....F.
45F0:  C4 5E 0E 8B 46 F8 26 39  07 7C 03 E9 15 00 8B 46   .^..F.&9 .|.....F
4600:  F8 C4 5E 0E 26 89 07 8B  46 F0 89 46 FE 89 46 F4   ..^.&... F..F..F.
4610:  E9 2D 00 C4 5E 0E 8B 46  F8 26 39 07 74 03 E9 1A   .-..^..F .&9.t...
4620:  00 83 7E F4 00 75 03 E9  11 00 8B 46 F0 03 46 F4   ..~..u.. ...F..F.
4630:  99 2B C2 D1 F8 89 46 FE  E9 05 00 C7 46 F4 00 00   .+....F. ....F...
4640:  E9 7E FF 8B 46 FC 29 46  FE 8B 46 FE E9 00 00 5E   .~..F.)F ..F....^
4650:  5F 8B E5 5D CB 55 8B EC  81 EC 00 00 57 56 B8 10   _..].U.. ....WV..
4660:  0E 50 B8 00 00 50 B9 CA  D1 BA 62 23 52 51 9A 86   .P...P.. ..b#RQ..
4670:  2B AF 0D 83 C4 08 B8 40  01 50 B8 00 00 50 B8 04   +......@ .P...P..
4680:  EA B9 AA 14 51 50 9A 86  2B AF 0D 83 C4 08 5E 5F   ....QP.. +.....^_
4690:  8B E5 5D CB 55 8B EC 81  EC 5C 00 57 56 C7 46 DA   ..].U... .\.WV.F.
46A0:  00 00 C7 46 FC AC 0D C7  46 D8 32 00 8B 46 D8 99   ...F.... F.2..F..
46B0:  89 46 AE 89 56 B0 C7 46  B6 14 00 B8 FF FF 89 46   .F..V..F .......F
46C0:  A6 89 46 B4 B8 00 00 BA  00 00 89 46 D2 89 56 D4   ..F..... ...F..V.
46D0:  89 46 CE 89 56 D0 89 46  C4 89 56 C6 89 46 C0 89   .F..V..F ..V..F..
46E0:  56 C2 C7 46 BC 01 00 E9  03 00 FF 46 BC 8E 06 0C   V..F.... ...F....
46F0:  0B 8B 46 BC 26 39 06 38  C1 7F 03 E9 5F 05 8B 46   ..F.&9.8 ...._..F
4700:  DA 89 46 DE C7 46 F8 FF  FF B8 1A 00 F7 6E DA 8B   ..F..F.. .....n..
4710:  D8 8E 06 1A 0B 26 8B 87  96 D4 89 46 EC B8 1A 00   .....&.. ...F....
4720:  F7 6E DA 8B D8 26 8B 87  98 D4 89 46 E4 FF 46 DA   .n...&.. ...F..F.
4730:  8B 46 D8 99 89 46 A8 89  56 AA B8 1A 00 F7 6E DA   .F...F.. V.....n.
4740:  8B D8 8E 06 1A 0B 26 83  BF 96 D4 FF 75 03 E9 52   ......&. ....u..R
4750:  03 C7 46 CC 00 00 B8 1A  00 F7 6E DA 8B D8 26 8B   ..F..... ..n...&.
4760:  87 96 D4 89 46 FA B8 1A  00 F7 6E DA 8B D8 26 8B   ....F... ..n...&.
4770:  87 98 D4 89 46 F4 B8 1A  00 F7 6E DA 8B D8 26 C7   ....F... ..n...&.
4780:  87 9A D4 01 00 B8 1A 00  F7 6E DA 8B D8 26 8B 87   ........ .n...&..
4790:  A6 D4 2B 06 5C 0D 89 46  B2 B8 1A 00 F7 6E DA 8B   ..+.\..F .....n..
47A0:  D8 26 8B 87 A8 D4 2B 06  5C 0D 89 46 AC B8 1A 00   .&....+. \..F....
47B0:  F7 6E DA 8B D8 26 8B 87  9E D4 2B 06 5E 0D 89 46   .n...&.. ..+.^..F
47C0:  EE B8 1A 00 F7 6E DA 8B  D8 26 8B 87 A0 D4 2B 06   .....n.. .&....+.
47D0:  5E 0D 89 46 EA B8 1A 00  F7 6E DA 8B D8 26 8B 87   ^..F.... .n...&..
47E0:  A2 D4 2B 06 60 0D 89 46  E8 B8 1A 00 F7 6E DA 8B   ..+.`..F .....n..
47F0:  D8 26 8B 87 A4 D4 2B 06  60 0D 89 46 DC B8 1A 00   .&....+. `..F....
4800:  F7 6E DA 8B D8 26 8B 87  AA D4 2B 06 5C 0D 89 46   .n...&.. ..+.\..F
4810:  C8 B8 1A 00 F7 6E DA 8B  D8 26 8B 87 AE D4 89 46   .....n.. .&.....F
4820:  A4 B8 1A 00 F7 6E DA 8B  D8 26 8B 87 AC D4 89 46   .....n.. .&.....F
4830:  BE FF 46 DA B8 1A 00 F7  6E EC 8B D8 8E 06 18 0B   ..F..... n.......
4840:  26 F6 87 92 0C 01 75 03  E9 13 00 FF 76 B2 9A 32   &.....u. ....v..2
4850:  2C AF 0D 83 C4 02 3D 12  00 7E 03 E9 3D 00 B8 1A   ,.....=. .~..=...
4860:  00 F7 6E E4 8B D8 8E 06  18 0B 26 F6 87 92 0C 01   ..n..... ..&.....
4870:  75 03 E9 13 00 FF 76 AC  9A 32 2C AF 0D 83 C4 02   u.....v. .2,.....
4880:  3D 12 00 7E 03 E9 13 00  FF 76 C8 9A 32 2C AF 0D   =..~.... .v..2,..
4890:  83 C4 02 3D 12 00 7F 03  E9 03 00 E9 9C FE FF 76   ...=.... .......v
```

```
48A0:  EE 9A 32 2C AF 0D 83 C4  02 3D 28 00 7E 03 E9 13   ..2,.... .=(.~...
48B0:  00 FF 76 E8 9A 32 2C AF  0D 83 C4 02 3D 28 00 7F   ..v..2,. ....=(..
48C0:  03 E9 03 00 E9 73 FE B8  1A 00 F7 6E EC 8B D8 8E   .....s.. ...n....
48D0:  06 18 0B 26 F6 87 92 0C  08 75 03 E9 17 00 B8 1A   ...&.... .u......
48E0:  00 F7 6E FA 8B D8 8E 06  16 0B 26 F6 87 24 04 08   ..n..... ..&..$..
48F0:  75 03 E9 8A 00 B8 1A 00  F7 6E EC 8B D8 8E 06 18   u....... .n......
4900:  0B 26 F6 87 92 0C 08 74  03 E9 17 00 B8 1A 00 F7   .&.....t ........
4910:  6E FA 8B D8 8E 06 16 0B  26 F6 87 24 04 08 74 03   n....... &..$..t.
4920:  E9 5C 00 B8 1A 00 F7 6E  E4 8B D8 8E 06 18 0B 26   .\.....n .......&
4930:  F6 87 92 0C 08 75 03 E9  17 00 B8 1A 00 F7 6E F4   .....u.. ......n.
4940:  8B D8 8E 06 16 0B 26 F6  87 24 04 08 75 03 E9 2E   ......&. .$..u...
4950:  00 B8 1A 00 F7 6E E4 8B  D8 8E 06 18 0B 26 F6 87   .....n.. .....&..
4960:  92 0C 08 74 03 E9 1A 00  B8 1A 00 F7 6E F4 8B D8   ...t.... ....n...
4970:  8E 06 16 0B 26 F6 87 24  04 08 75 03 E9 03 00 FF   ....&..$ ..u.....
4980:  46 CC FF 76 EA 9A 32 2C  AF 0D 83 C4 02 3D 28 00   F..v..2, .....=(.
4990:  7E 03 E9 13 00 FF 76 DC  9A 32 2C AF 0D 83 C4 02   ~.....v. .2,.....
49A0:  3D 28 00 7F 03 E9 03 00  E9 8F FD 8B 46 EE 8B C8   =(...... ....F...
49B0:  F7 E9 8B C8 8B 46 E8 8B  D8 F7 EB 03 C8 8B 46 BE   .....F.. ......F.
49C0:  8B D8 F7 EB 03 C1 8B C8  8B 46 C8 8B D8 F7 EB 03   ........ .F......
49D0:  C1 8B C8 8B 46 AC 8B D8  F7 EB 03 C1 8B C8 8B 46   ....F... .......F
49E0:  B2 8B D8 F7 EB 03 C1 8B  C8 8B 46 DC 8B D8 F7 EB   ........ ..F.....
49F0:  03 C1 8B C8 8B 46 EA 8B  D8 F7 EB 03 C1 89 46 E6   .....F.. ......F.
4A00:  8B 46 E6 99 F7 7E A4 99  89 46 B8 89 56 BA 8B 46   .F...~.. .F..V..F
4A10:  FC 39 46 E6 7C 03 E9 87  00 83 7E E6 00 7F 03 E9   .9F.|... ..~.....
4A20:  7E 00 8B 46 B8 8B 56 BA  39 56 AA 7D 03 E9 20 00   ~..F..V. 9V.}.. .
4A30:  7E 03 E9 08 00 39 46 A8  77 03 E9 13 00 8B 46 B8   ~....9F. w.....F.
4A40:  8B 56 BA 89 46 A8 89 56  AA 8B 46 DA 48 89 46 F8   .V..F..V ..F.H.F.
4A50:  8B 46 B6 39 46 CC 7D 03  E9 26 00 8B 46 B6 39 46   .F.9F.}. .&..F.9F
4A60:  CC 74 03 E9 3A 00 8B 46  AE 8B 56 B0 39 56 BA 7E   .t..:..F ..V.9V.~
4A70:  03 E9 2C 00 7D 03 E9 08  00 39 46 B8 72 03 E9 1F   ..,.}... .9F.r...
4A80:  00 8B 46 B8 8B 56 BA 89  46 AE 89 56 B0 8B 46 DE   ..F..V.. F..V..F.
4A90:  89 46 D6 8B 46 DA 48 89  46 CA 8B 46 CC 89 46 B6   .F..F.H. F..F..F.
4AA0:  E9 97 FC 83 7E F8 FF 7F  03 E9 AB 01 C7 46 FE FF   ....~... .....F..
4AB0:  FF B8 1A 00 F7 6E DE 8B  D8 8E 06 1A 0B 26 8B 87   .....n.. .....&..
4AC0:  96 D4 89 46 EC B8 1A 00  F7 6E DE 8B D8 26 8B 87   ...F.... .n...&..
4AD0:  98 D4 89 46 E4 B8 1A 00  F7 6E F8 8B D8 26 8B 87   ...F.... .n...&..
4AE0:  96 D4 89 46 FA B8 1A 00  F7 6E F8 8B D8 26 8B 87   ...F.... .n...&..
4AF0:  98 D4 89 46 F4 B8 1A 00  F7 6E EC 8B D8 8E 06 18   ...F.... .n......
4B00:  0B 26 F6 87 92 0C 01 75  03 E9 26 00 B8 1A 00 F7   .&.....u ..&.....
4B10:  6E FA 8B D8 8E 06 16 0B  26 F6 87 24 04 01 75 03   n....... &..$..u.
4B20:  E9 0F 00 8B 46 FA 89 46  FE 8B 46 EC 89 46 F6 E9   ....F..F ..F..F..
4B30:  3A 00 B8 1A 00 F7 6E E4  8B D8 8E 06 18 0B 26 F6   :.....n. ......&.
4B40:  87 92 0C 01 75 03 E9 23  00 B8 1A 00 F7 6E F4 8B   ....u..# .....n..
4B50:  D8 8E 06 16 0B 26 F6 87  24 04 01 75 03 E9 0C 00   .....&.. $..u....
4B60:  8B 46 F4 89 46 FE 8B 46  E4 89 46 F6 83 7E FE FF   .F..F..F ..F..~..
4B70:  7F 03 E9 E2 00 8E 06 08  0B 26 FF 06 4E EB 83 7E   ........ .&..N..~
4B80:  B4 FF 7F 03 E9 C4 00 B8  1A 00 F7 6E F6 8B D8 8E   ........ ...n....
4B90:  06 18 0B 26 8B 87 7A 0C  8B C8 B8 1A 00 F7 6E A6   ...&..z. ......n.
4BA0:  8B D8 26 2B 8F 7A 0C 89  4E E0 B8 1A 00 F7 6E F6   ..&+.z.. N.....n.
4BB0:  8B D8 26 8B 87 7C 0C 8B  C8 B8 1A 00 F7 6E A6 8B   ..&..|.. .....n..
4BC0:  D8 26 2B 8F 7C 0C 89 4E  E2 B8 1A 00 F7 6E FE 8B   .&+.|..N .....n..
4BD0:  D8 8E 06 16 0B 26 8B 87  0C 04 8B C8 B8 1A 00 F7   .....&.. ........
4BE0:  6E B4 8B D8 26 2B 8F 0C  04 89 4E F0 B8 1A 00 F7   n...&+.. ..N.....
```

B_ENROLL.DMP Tuesday, July 13, 1993 1:12 pm Page 24


```
4BF0:  6E FE 8B D8 26 8B 87 0E  04 8B C8 B8 1A 00 F7 6E   n...&... .......n
4C00:  B4 8B D8 26 2B 8F 0E 04  89 4E F2 8B 46 E0 2B 46   ...&+... .N..F.+F
4C10:  F0 50 9A 32 2C AF 0D 83  C4 02 99 01 46 C0 11 56   .P.2,... ....F..V
4C20:  C2 8B 46 E2 2B 46 F2 50  9A 32 2C AF 0D 83 C4 02   ..F.+F.P .2,.....
4C30:  99 01 46 C4 11 56 C6 8B  46 E0 99 01 46 CE 11 56   ..F..V.. F...F..V
4C40:  D0 8B 46 E2 99 01 46 D2  11 56 D4 8B 46 FE 89 46   ..F...F. .V..F..F
4C50:  B4 8B 46 F6 89 46 A6 FF  46 DA E9 8D FA 8B 46 D8   ..F..F.. F.....F.
4C60:  99 3B 56 B0 7D 03 E9 9C  00 7E 03 E9 08 00 3B 46   .;V.}... .~....;F
4C70:  AE 77 03 E9 8F 00 B8 1A  00 F7 6E D6 8B D8 8E 06   .w...... ..n.....
4C80:  1A 0B 26 8B 87 96 D4 C4  5E 06 26 89 07 B8 1A 00   ..&..... ^.&.....
4C90:  F7 6E D6 8B D8 8E 06 1A  0B 26 8B 87 98 D4 C4 5E   .n...... .&.....^
4CA0:  0A 26 89 07 B8 1A 00 F7  6E CA 8B D8 8E 06 1A 0B   .&...... n.......
4CB0:  26 8B 87 96 D4 C4 5E 0E  26 89 07 B8 1A 00 F7 6E   &.....^. &......n
4CC0:  CA 8B D8 8E 06 1A 0B 26  8B 87 98 D4 C4 5E 12 26   .......& .....^.&
4CD0:  89 07 8E 06 08 0B 26 83  3E 4E EB 02 7F 03 E9 13   ......&. >N......
4CE0:  00 8B 46 C4 03 46 C0 99  26 F7 3E 4E EB 26 A3 4C   ..F..F.. &.>N.&.L
4CF0:  EB E9 0B 00 8E 06 08 0B  26 C7 06 4C EB 64 00 B8   ........ &..L.d..
4D00:  01 00 E9 06 00 B8 00 00  E9 00 00 5E 5F 8B E5 5D   ........ ...^_..]
4D10:  CB 55 8B EC 81 EC 02 00  57 56 B8 1A 00 F7 6E 08   .U...... WV....n.
4D20:  8B D8 8E 06 18 0B 26 FF  B7 7C 0C B8 1A 00 F7 6E   ......&. .|.....n
4D30:  08 8B D8 26 FF B7 7A 0C  B8 1A 00 F7 6E 06 8B D8   ...&..z. ....n...
4D40:  26 FF B7 7C 0C B8 1A 00  F7 6E 06 8B D8 26 FF B7   &..|.... .n...&..
4D50:  7A 0C B8 1A 00 F7 6E 0C  8B D8 8E 06 16 0B 26 FF   z.....n. ......&.
4D60:  B7 0E 04 B8 1A 00 F7 6E  0C 8B D8 26 FF B7 0C 04   .......n ...&....
4D70:  B8 1A 00 F7 6E 0A 8B D8  26 FF B7 0E 04 B8 1A 00   ....n... &.......
4D80:  F7 6E 0A 8B D8 26 FF B7  0C 04 9A 8E 01 AA 08 83   .n...&.. ........
4D90:  C4 10 89 46 FE 8E 06 20  0B 26 83 3E EA 00 00 75   ...F...  .&.>...u
4DA0:  03 E9 7E 00 F7 5E FE B8  1A 00 F7 6E 08 8B D8 8E   ..~..^.. ...n....
4DB0:  06 18 0B 26 FF B7 7C 0C  B8 1A 00 F7 6E 08 8B D8   ...&..|. ....n...
4DC0:  26 FF B7 7A 0C B8 1A 00  F7 6E 06 8B D8 26 FF B7   &..z.... .n...&..
4DD0:  7C 0C B8 1A 00 F7 6E 06  8B D8 26 FF B7 7A 0C B8   |.....n. ..&..z..
4DE0:  1A 00 F7 6E 0C 8B D8 8E  06 16 0B 26 FF B7 0E 04   ...n.... ...&....
4DF0:  B8 1A 00 F7 6E 0C 8B D8  26 FF B7 0C 04 B8 1A 00   ....n... &.......
4E00:  F7 6E 0A 8B D8 26 FF B7  0E 04 B8 1A 00 F7 6E 0A   .n...&.. ......n.
4E10:  8B D8 26 FF B7 0C 04 9A  D3 02 AA 08 83 C4 10 E9   ..&..... ........
4E20:  78 00 B8 1A 00 F7 6E 0C  8B D8 8E 06 16 0B 26 FF   x.....n. ......&.
4E30:  B7 0E 04 B8 1A 00 F7 6E  0C 8B D8 26 FF B7 0C 04   .......n ...&....
4E40:  B8 1A 00 F7 6E 0A 8B D8  26 FF B7 0E 04 B8 1A 00   ....n... &.......
4E50:  F7 6E 0A 8B D8 26 FF B7  0C 04 B8 1A 00 F7 6E 08   .n...&.. ......n.
4E60:  8B D8 8E 06 18 0B 26 FF  B7 7C 0C B8 1A 00 F7 6E   ......&. .|.....n
4E70:  08 8B D8 26 FF B7 7A 0C  B8 1A 00 F7 6E 06 8B D8   ...&..z. ....n...
4E80:  26 FF B7 7C 0C B8 1A 00  F7 6E 06 8B D8 26 FF B7   &..|.... .n...&..
4E90:  7A 0C 9A D3 02 AA 08 83  C4 10 8B 46 FE 8E 06 08   z....... ...F....
4EA0:  0B 26 A3 52 EB 5E 5F 8B  E5 5D CB 55 8B EC 81 EC   .&.R.^_. .].U....
4EB0:  12 00 57 56 8D 46 EE 16  50 8D 4E F0 16 51 9A FD   ..WV.F.. P.N..Q..
4EC0:  05 5B 0C 83 C4 08 8B 46  EE 89 46 FE C7 46 FC 00   .[.....F ..F..F..
4ED0:  00 C7 46 F4 00 00 E9 03  00 FF 46 F4 C4 5E 06 8B   ..F..... ..F..^..
4EE0:  46 F4 26 39 47 02 7F 03  E9 1E 01 8B 46 F4 8B C8   F.&9G... ....F...
4EF0:  D1 E0 03 C1 D1 E0 03 46  06 8B 56 08 2D 9A 63 52   .......F ..V.-.cR
4F00:  50 8B 46 F4 8B C8 D1 E0  03 C1 D1 E0 03 46 06 8B   P.F..... .....F..
4F10:  56 08 2D 9C 63 52 50 9A  F8 01 AA 08 83 C4 08 8B   V.-.cRP. ........
4F20:  76 F4 8B C6 D1 E6 03 F0  D1 E6 C4 5E 06 26 8B 80   v....... ...^.&..
4F30:  64 9C 89 46 F8 8B 76 F4  8B C6 D1 E6 03 F0 D1 E6   d..F..v. ........
```

```
4F40:  C4 5E 06 26 8B 80 66 9C  89 46 F6 8B 76 F4 8B C6   .^.&..f. .F..v...
4F50:  D1 E6 03 F0 D1 E6 C4 5E  06 26 8B 80 68 9C 89 46   .......^ .&..h..F
4F60:  FA B8 1A 00 F7 6E FA 8B  F0 C4 5E 06 8B 46 F8 26   .....n.. ..^..F.&
4F70:  89 80 0C 04 B8 1A 00 F7  6E FA 8B F0 C4 5E 06 8B   ........ n....^..
4F80:  46 F6 26 89 80 0E 04 8B  46 F6 39 46 FE 7F 03 E9   F.&..... F.9F....
4F90:  06 00 8B 46 F6 89 46 FE  8B 46 F6 39 46 FC 7C 03   ...F..F. .F.9F.|.
4FA0:  E9 06 00 8B 46 F6 89 46  FC C7 46 F2 00 00 E9 03   ....F..F ..F.....
4FB0:  00 FF 46 F2 83 7E F2 02  7E 03 E9 49 00 B8 1A 00   ..F..~.. ~..I....
4FC0:  F7 6E FA 8B 76 F2 8B CE  D1 E6 03 F1 D1 E6 03 F0   .n..v... ........
4FD0:  C4 5E 06 26 83 B8 10 04  FF 75 03 E9 25 00 8E 06   .^.&.... .u..%...
4FE0:  08 0B 26 A1 52 EB 8B C8  B8 1A 00 F7 6E FA 8B 76   ..&.R... ....n..v
4FF0:  F2 8B D6 D1 E6 03 F2 D1  E6 03 F0 C4 5E 06 26 01   ........ ....^.&.
5000:  88 12 04 E9 AB FF E9 D0  FE 8B 46 0A 8B 56 0C 05   ........ ..F..V..
5010:  10 00 52 50 8B 46 0A 8B  56 0C 05 0E 00 52 50 9A   ..RP.F.. V....RP.
5020:  F8 01 AA 08 83 C4 08 8B  46 FE C4 5E 0A 26 89 47   ........ F..^.&.G
5030:  12 8B 46 FC C4 5E 0A 26  89 47 14 5E 5F 8B E5 5D   ..F..^.& .G.^_..]
5040:  CB 55 8B EC 81 EC 20 00  57 56 B8 00 00 C4 5E 0A   .U.... . WV....^.
5050:  26 89 47 08 C4 5E 0A 26  89 47 02 C4 5E 0A 26 89   &.G..^.& .G..^.&.
5060:  47 06 C4 5E 0A 26 89 47  04 B8 00 00 89 46 E0 99   G..^.&.G .....F..
5070:  89 46 F0 89 56 F2 B8 00  00 BA 00 00 89 46 E2 89   .F..V... .....F..
5080:  56 E4 89 46 E8 89 56 EA  8D 46 E6 16 50 8D 4E EC   V..F..V. .F..P.N.
5090:  16 51 9A FD 05 5B 0C 83  C4 08 8B 46 E6 89 46 FE   .Q...[.. ...F..F.
50A0:  C7 46 FC 00 00 C7 46 EE  00 00 E9 03 00 FF 46 EE   .F....F. ......F.
50B0:  C4 5E 06 8B 46 EE 26 39  07 7F 03 E9 F5 01 8B 76   .^..F.&9 .......v
50C0:  EE D1 E6 C4 5E 06 26 8B  40 24 89 46 F8 83 7E F8   ....^.&. @$.F..~.
50D0:  FF 75 03 E9 DA 01 B8 1A  00 F7 6E F8 8B F0 C4 5E   .u...... ..n....^
50E0:  06 26 83 A0 24 04 F9 B8  1A 00 F7 6E F8 8B F0 C4   .&..$... ...n....
50F0:  5E 06 26 8B 80 0C 04 99  01 46 E8 11 56 EA B8 1A   ^.&..... .F..V...
5100:  00 F7 6E F8 8B F0 C4 5E  06 26 8B 80 0E 04 99 01   ..n....^ .&......
5110:  46 E2 11 56 E4 B8 1A 00  F7 6E F8 8B F0 C4 5E 06   F..V.... .n....^.
5120:  8B 46 FE 26 39 80 0E 04  7C 03 E9 13 00 B8 1A 00   .F.&9... |.......
5130:  F7 6E F8 8B F0 C4 5E 06  26 8B 80 0E 04 89 46 FE   .n....^. &.....F.
5140:  B8 1A 00 F7 6E F8 8B F0  C4 5E 06 8B 46 FC 26 39   ....n... .^..F.&9
5150:  80 0E 04 7F 03 E9 13 00  B8 1A 00 F7 6E F8 8B F0   ........ ....n...
5160:  C4 5E 06 26 8B 80 0E 04  89 46 FC FF 76 F8 8B 46   .^.&.... .F..v..F
5170:  06 8B 56 08 05 0C 04 52  50 9A 0C 00 AA 08 83 C4   ..V....R P.......
5180:  06 89 46 F8 83 7E F8 FF  75 03 E9 20 01 B8 1A 00   ..F..~.. u.. ....
5190:  F7 6E F8 8B F0 C4 5E 06  26 F6 80 24 04 08 75 03   .n....^. &..$..u.
51A0:  E9 8A 00 C4 5E 0A 26 FF  47 04 B8 1A 00 F7 6E F8   ....^.&. G.....n.
51B0:  8B F0 C4 5E 06 26 83 88  24 04 10 C7 46 F4 00 00   ...^.&.. $...F...
51C0:  E9 03 00 FF 46 F4 83 7E  F4 03 7C 03 E9 5E 00 B8   ....F..~ ..|..^..
51D0:  1A 00 F7 6E F8 8B 76 F4  8B CE D1 E6 03 F1 D1 E6   ...n..v. ........
51E0:  03 F0 C4 5E 06 26 83 B8  10 04 FF 74 03 E9 3A 00   ...^.&.. ...t..:.
51F0:  B8 1A 00 F7 6E F8 8B 76  F4 8B CE D1 E6 03 F1 D1   ....n..v ........
5200:  E6 03 F0 C4 5E 06 26 C7  80 12 04 FF FF B8 1A 00   ....^.&. ........
5210:  F7 6E F8 8B 76 F4 8B CE  D1 E6 03 F1 D1 E6 03 F0   .n..v... ........
5220:  C4 5E 06 26 C7 80 14 04  FF FF E9 96 FF B8 1A 00   .^.&.... ........
5230:  F7 6E F8 8B F0 C4 5E 06  26 8B 80 16 04 89 46 F6   .n....^. &.....F.
5240:  B8 1A 00 F7 6E F8 8B F0  C4 5E 06 26 F6 80 24 04   ....n... .^.&..$.
5250:  10 74 03 E9 07 00 C4 5E  0A 26 FF 47 08 B8 1A 00   .t.....^ .&.G....
5260:  F7 6E F6 8B F0 C4 5E 06  26 F6 80 24 04 01 74 03   .n....^. &..$..t.
5270:  E9 16 00 B8 1A 00 F7 6E  F8 8B F0 C4 5E 06 26 F6   .......n ....^.&.
5280:  80 24 04 01 75 03 E9 07  00 C4 5E 0A 26 FF 47 06   .$..u... ..^.&.G.
```

```
5290:  B8 1A 00 F7 6E F8 8B F0  C4 5E 06 26 8B 80 1A 04   ....n... .^.&....
52A0:  89 46 FA 8B 46 FA C4 5E  0A 26 01 47 02 E9 1D FE   .F..F..^ .&.G....
52B0:  E9 FA FD C4 5E 06 26 8B  47 02 99 52 50 FF 76 EA   ....^.&. G..RP.v.
52C0:  FF 76 E8 9A C4 2C AF 0D  C4 5E 0A 26 89 47 0E C4   .v...,.. .^.&.G..
52D0:  5E 06 26 8B 47 02 99 52  50 FF 76 E4 FF 76 E2 9A   ^.&.G..R P.v..v..
52E0:  C4 2C AF 0D C4 5E 0A 26  89 47 10 8B 46 FE C4 5E   .,...^.& .G..F..^
52F0:  0A 26 89 47 12 8B 46 FC  C4 5E 0A 26 89 47 14 5E   .&.G..F. .^.&.G.^
5300:  5F 8B E5 5D CB 55 8B EC  81 EC 24 00 57 56 C7 46   _..].U.. ..$.WV.F
5310:  E6 64 00 B8 00 00 BA 00  00 89 46 E2 89 56 E4 89   .d...... ..F..V..
5320:  46 F4 89 56 F6 89 46 F0  89 56 F2 89 46 FC 89 56   F..V..F. .V..F..V
5330:  FE B8 00 00 BA 00 00 89  46 E8 89 56 EA 89 46 F8   ........ F..V..F.
5340:  89 56 FA 8D 46 DC 16 50  8D 46 DE 16 50 9A FD 05   .V..F..P .F..P...
5350:  5B 0C 83 C4 08 8B 46 DE  99 2B C2 D1 F8 89 46 E6   [.....F. .+....F.
5360:  C7 46 E0 00 00 E9 03 00  FF 46 E0 C4 5E 06 8B 46   .F...... .F..^..F
5370:  E0 26 39 07 7F 03 E9 45  01 8B 76 E0 D1 E6 C4 5E   .&9....E ..v....^
5380:  06 26 8B 40 24 89 46 EC  83 7E EC FF 75 03 E9 2A   .&.@$.F. .~..u..*
5390:  01 B8 1A 00 F7 6E EC 8B  F0 C4 5E 06 26 83 A0 24   .....n.. ..^.&..$
53A0:  04 F9 B8 1A 00 F7 6E EC  8B F0 C4 5E 06 26 8B 80   ......n. ...^.&..
53B0:  18 04 89 46 EE 83 7E EE  00 7F 03 E9 E1 00 B8 1A   ...F..~. ........
53C0:  00 F7 6E EC 8B F0 C4 5E  06 26 F6 80 24 04 01 74   ..n....^ .&..$..t
53D0:  03 E9 CB 00 B8 1A 00 F7  6E EC 8B F0 C4 5E 06 26   ........ n....^.&
53E0:  F6 80 24 04 10 75 03 E9  B5 00 B8 1A 00 F7 6E EC   ..$..u.. ......n.
53F0:  8B F0 C4 5E 06 8B 46 E6  26 39 80 0C 04 7C 03 E9   ...^..F. &9...|..
5400:  4A 00 81 7E EE 0E 01 7E  03 E9 09 00 83 7E EE 5A   J..~...~ .....~.Z
5410:  7C 03 E9 37 00 81 7E EE  0E 01 7F 03 E9 05 00 81   |..7..~. ........
5420:  6E EE 68 01 8B 46 EE 99  01 46 FC 11 56 FE 8B 46   n.h..F.. .F..V..F
5430:  EE 99 52 50 52 50 9A 5E  2D AF 0D 01 46 F8 11 56   ..RPRP.^ -...F..V
5440:  FA 83 46 F4 01 83 56 F6  00 E9 53 00 B8 1A 00 F7   ..F...V. ..S.....
5450:  6E EC 8B F0 C4 5E 06 8B  46 DE 26 2B 80 0C 04 3B   n....^.. F.&+...;
5460:  46 E6 7C 03 E9 38 00 83  7E EE 5A 7F 03 E9 2F 00   F.|..8.. ~.Z.../.
5470:  81 7E EE 0E 01 7C 03 E9  25 00 8B 46 EE 99 01 46   .~...|.. %..F...F
5480:  F0 11 56 F2 8B 46 EE 99  52 50 52 50 9A 5E 2D AF   ..V..F.. RPRP.^-.
5490:  0D 01 46 E8 11 56 EA 83  46 E2 01 83 56 E4 00 FF   ..F..V.. F...V...
54A0:  76 EC 8B 46 06 8B 56 08  05 0C 04 52 50 9A 0C 00   v..F..V. ...RP...
54B0:  AA 08 83 C4 06 89 46 EC  E9 CD FE E9 AA FE 5E 5F   ......F. ......^_
54C0:  8B E5 5D CB 55 8B EC 81  EC 12 00 57 56 C4 5E 0A   ..].U... ...WV.^.
54D0:  26 8B 47 10 2D 8C 00 C4  5E 0A 26 8B 4F 12 83 C1   &.G.-... ^.&.O...
54E0:  0A 3B C1 7C 03 E9 02 00  8B C1 89 46 FC C4 5E 0A   .;.|.... ...F..^.
54F0:  26 8B 47 14 2D 0A 00 C4  5E 0A 26 8B 4F 10 81 C1   &.G.-... ^.&.O...
5500:  8C 00 3B C1 7F 03 E9 02  00 8B C1 89 46 F8 B8 00   ..;..... ....F...
5510:  00 89 46 F4 89 46 FA C7  46 F0 00 00 E9 03 00 FF   ..F..F.. F.......
5520:  46 F0 C4 5E 06 8B 46 F0  26 39 47 02 7F 03 E9 87   F..^..F. &9G.....
5530:  00 B8 1A 00 8B 76 F0 8B  CE D1 E6 03 F1 D1 E6 C4   .....v.. ........
5540:  5E 06 26 F7 A8 68 9C 8B  F0 C4 5E 06 26 F6 80 24   ^.&..h.. ..^.&..$
5550:  04 01 74 03 E9 5E 00 8B  76 F0 8B C6 D1 E6 03 F0   ..t..^.. v.......
5560:  D1 E6 C4 5E 06 8B 46 FC  26 39 80 66 9C 7F 03 E9   ...^..F. &9.f....
5570:  43 00 8B 76 F0 8B C6 D1  E6 03 F0 D1 E6 C4 5E 06   C..v.... ......^.
5580:  8B 46 F8 26 39 80 66 9C  7C 03 E9 28 00 C4 5E 0A   .F.&9.f. |..(..^.
5590:  26 8B 47 0E 8B 76 F0 8B  CE D1 E6 03 F1 D1 E6 C4   &.G..v.. ........
55A0:  5E 06 26 39 80 64 9C 7C  03 E9 06 00 FF 46 FA E9   ^.&9.d.| .....F..
55B0:  03 00 FF 46 F4 E9 67 FF  B8 28 00 F7 6E FA B9 64   ...F..g. .(..n..d
55C0:  00 99 F7 F9 89 46 F6 B8  3C 00 F7 6E F4 99 F7 F9   .....F.. <..n....
55D0:  89 46 F2 B8 00 00 89 46  FE 89 46 EE C7 46 F0 00   .F.....F ..F..F..
```

B_ENROLL.DMP                Tuesday, July 13, 1993 1:12 pm                Page 27

```
55E0:  00 E9 03 00 FF 46 F0 C4  5E 06 8B 46 F0 26 39 47   .....F.. ^..F.&9G
55F0:  02 7F 03 E9 D1 00 B8 1A  00 8B 76 F0 8B CE D1 E6   ........ ..v.....
5600:  03 F1 D1 E6 C4 5E 06 26  F7 A8 68 9C 8B F0 C4 5E   .....^.& ..h....^
5610:  06 26 F6 80 24 04 01 74  03 E9 A8 00 8B 76 F0 8B   .&..$..t .....v..
5620:  C6 D1 E6 03 F0 D1 E6 C4  5E 06 8B 46 FC 26 39 80   ........ ^..F.&9.
5630:  66 9C 7F 03 E9 8D 00 8B  76 F0 8B C6 D1 E6 03 F0   f....... v.......
5640:  D1 E6 C4 5E 06 8B 46 F8  26 39 80 66 9C 7C 03 E9   ...^..F. &9.f.|..
5650:  72 00 C4 5E 0A 26 8B 47  0E 8B 76 F0 8B CE D1 E6   r..^.&.G ..v.....
5660:  03 F1 D1 E6 C4 5E 06 26  39 80 64 9C 7C 03 E9 2B   .....^.& 9.d.|..+
5670:  00 FF 46 EE 8B 46 F6 39  46 EE 74 03 E9 1A 00 8B   ..F..F.9 F.t.....
5680:  76 F0 8B C6 D1 E6 03 F0  D1 E6 C4 5E 06 26 8B 80   v....... ...^.&..
5690:  64 9C C4 5E 0A 26 89 47  16 E9 28 00 FF 46 FE 8B   d..^.&.G ..(..F..
56A0:  46 F2 39 46 FE 74 03 E9  1A 00 8B 76 F0 8B C6 D1   F.9F.t.. ...v....
56B0:  E6 03 F0 D1 E6 C4 5E 06  26 8B 80 64 9C C4 5E 0A   ......^. &..d..^.
56C0:  26 89 47 18 E9 1D FF 5E  5F 8B E5 5D CB 55 8B EC   &.G....^ _..].U..
56D0:  81 EC 14 00 57 56 8B 76  0C 8B C6 D1 E6 03 F0 D1   ....WV.v ........
56E0:  E6 C4 5E 08 26 8B 80 68  9C 89 46 FA C7 46 F0 01   ..^.&..h ..F..F..
56F0:  00 B8 1A 00 F7 6E FA 8B  F0 C4 5E 08 26 83 B8 16   .....n.. ..^.&...
5700:  04 FF 74 03 E9 05 00 C7  46 F0 00 00 B8 1A 00 F7   ..t..... F.......
5710:  6E FA 8B F0 8B 46 F0 8B  C8 D1 E0 03 C1 D1 E0 03   n....F.. ........
5720:  F0 C4 5E 08 26 8B 80 12  04 89 46 F8 8B 46 F8 B9   ..^.&... ..F..F..
5730:  B4 00 99 F7 F9 83 FA 5A  75 03 E9 CB 01 FF 76 F8   .......Z u.....v.
5740:  9A 6F 02 B1 09 83 C4 02  89 46 FC 8B 46 0E 99 F7   .o...... .F..F...
5750:  D8 83 D2 00 F7 DA 89 46  F2 89 56 F4 8B 46 FC 99   .......F ..V..F..
5760:  52 50 8D 46 F2 50 9A BC  2D AF 0D B8 E8 03 BA 00   RP.F.P.. -.......
5770:  00 52 50 FF 76 F4 FF 76  F2 9A C4 2C AF 0D 89 46   .RP.v..v ...,...F
5780:  F6 FF 76 F6 9A 32 2C AF  0D 83 C4 02 3D 3C 00 7E   ..v..2,. ....=<.~
5790:  03 E9 74 01 8B 46 0E 8B  76 0C 8B CE D1 E6 03 F1   ..t..F.. v.......
57A0:  D1 E6 C4 5E 08 26 01 80  64 9C 8B 76 0C 8B C6 D1   ...^.&.. d..v....
57B0:  E6 03 F0 D1 E6 C4 5E 08  26 8B 80 64 9C 8B C8 B8   ......^. &..d....
57C0:  1A 00 F7 6E FA 8B F0 C4  5E 08 26 89 88 0C 04 8B   ...n.... ^.&.....
57D0:  46 F6 8B 76 0C 8B CE D1  E6 03 F1 D1 E6 C4 5E 08   F..v.... ......^.
57E0:  26 01 80 66 9C 8B 76 0C  8B C6 D1 E6 03 F0 D1 E6   &..f..v. ........
57F0:  C4 5E 08 26 8B 80 66 9C  8B C8 B8 1A 00 F7 6E FA   .^.&..f. ......n.
5800:  8B F0 C4 5E 08 26 89 88  0E 04 FF 76 0E 9A 32 2C   ...^.&.. ...v..2,
5810:  AF 0D 83 C4 02 B9 10 27  F7 E9 89 46 F2 89 56 F4   .......' ...F..V.
5820:  FF 76 F8 9A 97 00 B1 09  83 C4 02 50 9A 32 2C AF   .v...... ...P.2,.
5830:  0D 83 C4 02 3D 01 00 7C  03 E9 06 00 B8 01 00 E9   ....=..| ........
5840:  14 00 FF 76 F8 9A 97 00  B1 09 83 C4 02 50 9A 32   ...v.... .....P.2
5850:  2C AF 0D 83 C4 02 99 52  50 8D 46 F2 50 9A 9C 2D   ,......R P.F.P..-
5860:  AF 0D 8B 46 F2 89 46 EE  B8 1A 00 F7 6E FA 8B F0   ...F..F. ....n...
5870:  8B 46 F0 8B C8 D1 E0 03  C1 D1 E0 03 F0 C4 5E 08   .F...... ......^.
5880:  8B 46 EE 26 01 80 14 04  B8 1A 00 F7 6E FA 8B F0   .F.&.... ....n...
5890:  8B 46 F0 8B C8 D1 E0 03  C1 D1 E0 03 F0 C4 5E 08   .F...... ......^.
58A0:  26 8B 80 10 04 89 46 FE  83 7E F0 01 74 03 E9 44   &.....F. .~..t..D
58B0:  00 B8 1A 00 F7 6E FE 8B  F0 C4 5E 08 8B 46 FA 26   .....n.. ..^..F.&
58C0:  39 80 10 04 74 03 E9 16  00 B8 1A 00 F7 6E FE 8B   9...t... .....n..
58D0:  F0 C4 5E 08 8B 46 EE 26  01 80 14 04 E9 13 00 B8   ..^..F.& ........
58E0:  1A 00 F7 6E FE 8B F0 C4  5E 08 8B 46 EE 26 01 80   ...n.... ^..F.&..
58F0:  20 04 E9 13 00 B8 1A 00  F7 6E FE 8B F0 C4 5E 08    ....... .n....^.
5900:  8B 46 EE 26 01 80 1A 04  5E 5F 8B E5 5D CB 55 8B   .F.&.... ^_..].U.
5910:  EC 81 EC 06 00 57 56 C4  5E 0C 26 8B 47 10 2D 8C   .....WV. ^.&.G.-.
5920:  00 C4 5E 0C 26 8B 4F 12  83 C1 0A 3B C1 7C 03 E9   ..^.&.O. ...;.|..
```

```
5930:  02 00 8B C1 89 46 FE C4  5E 0C 26 8B 47 14 2D 0A   .....F.. ^.&.G.-.
5940:  00 C4 5E 0C 26 8B 4F 10  81 C1 8C 00 3B C1 7F 03   ..^.&.O. ....;...
5950:  E9 02 00 8B C1 89 46 FC  C7 46 FA 00 00 E9 03 00   ......F. .F......
5960:  FF 46 FA C4 5E 08 8B 46  FA 26 39 47 02 7F 03 E9   .F..^..F .&9G....
5970:  2D 01 B8 1A 00 8B 76 FA  8B CE D1 E6 03 F1 D1 E6   -.....v. ........
5980:  C4 5E 08 26 F7 A8 68 9C  8B F0 C4 5E 08 26 F6 80   .^.&..h. ...^.&..
5990:  24 04 01 74 03 E9 04 01  8B 76 FA 8B C6 D1 E6 03   $..t.... .v......
59A0:  F0 D1 E6 C4 5E 08 8B 46  FE 26 39 80 66 9C 7F 03   ....^..F .&9.f...
59B0:  E9 E9 00 8B 76 FA 8B C6  D1 E6 03 F0 D1 E6 C4 5E   ....v... .......^
59C0:  08 8B 46 FC 26 39 80 66  9C 7C 03 E9 CE 00 83 7E   ..F.&9.f .|.....~
59D0:  10 00 74 03 E9 64 00 C4  5E 0C 26 8B 47 0E 8B 76   ..t..d.. ^.&.G..v
59E0:  FA 8B CE D1 E6 03 F1 D1  E6 C4 5E 08 26 39 80 64   ........ ..^.&9.d
59F0:  9C 7C 03 E9 42 00 8B 76  FA 8B C6 D1 E6 03 F0 D1   .|..B..v ........
5A00:  E6 C4 5E 08 26 8B 80 64  9C C4 5E 0C 26 2B 47 16   ..^.&..d ..^.&+G.
5A10:  50 9A 32 2C AF 0D 83 C4  02 3D 1E 00 7C 03 E9 17   P.2,.... .=..|...
5A20:  00 FF 76 12 FF 76 FA FF  76 0A FF 76 08 FF 76 06   ..v..v.. v..v..v.
5A30:  9A DD 1E 5F 03 83 C4 0A  E9 61 00 C4 5E 0C 26 8B   ..._.... .a..^.&.
5A40:  47 0E 8B 76 FA 8B CE D1  E6 03 F1 D1 E6 C4 5E 08   G..v.... ......^.
5A50:  26 39 80 64 9C 7F 03 E9  42 00 8B 76 FA 8B C6 D1   &9.d.... B..v....
5A60:  E6 03 F0 D1 E6 C4 5E 08  26 8B 80 64 9C C4 5E 0C   ......^. &..d..^.
5A70:  26 2B 47 18 50 9A 32 2C  AF 0D 83 C4 02 3D 1E 00   &+G.P.2, .....=..
5A80:  7C 03 E9 17 00 FF 76 12  FF 76 FA FF 76 0A FF 76   |.....v. .v..v..v
5A90:  08 FF 76 06 9A DD 1E 5F  03 83 C4 0A E9 C1 FE 5E   ..v...._ .......^
5AA0:  5F 8B E5 5D CB 55 8B EC  81 EC 16 00 57 56 C7 46   _..].U.. ....WV.F
5AB0:  FA 00 00 C7 46 FC 00 00  8B 46 0A D1 E0 89 46 F4   ....F... .F....F.
5AC0:  8B 46 F4 03 46 14 3B 06  54 0D 7F 03 E9 03 00 A1   .F..F.;. T.......
5AD0:  54 0D 89 46 EE 8B 46 F4  03 46 16 3B 06 56 0D 7F   T..F..F. .F.;.V..
5AE0:  03 E9 03 00 A1 56 0D 89  46 EC 8B 46 14 89 46 F6   .....V.. F..F..F.
5AF0:  E9 03 00 FF 46 F6 8B 46  F6 39 46 EE 7F 03 E9 36   ....F..F .9F....6
5B00:  00 8B 46 16 89 46 F2 E9  03 00 FF 46 F2 8B 46 F2   ..F..F.. ...F..F.
5B10:  39 46 EC 7F 03 E9 1C 00  B8 3C 00 F7 6E F2 8B D8   9F...... .<..n...
5B20:  03 5E 06 8E 46 08 8B 76  F6 26 8A 00 2A E4 01 46   .^..F..v .&..*..F
5B30:  FC E9 D6 FF E9 BC FF 8B  46 18 2B 46 0A 03 46 14   ........ F.+F..F.
5B40:  8B 0E 54 0D 2B 4E 0A 3B  C1 7F 03 E9 02 00 8B C1   ..T.+N.; ........
5B50:  89 46 EE 8B 46 1A 2B 46  0A 03 46 16 8B 0E 56 0D   .F..F.+F ..F...V.
5B60:  2B 4E 0A 3B C1 7F 03 E9  02 00 8B C1 89 46 EC 8B   +N.;.... .....F..
5B70:  46 0A 01 46 14 8B 46 0A  01 46 16 8B 46 14 89 46   F..F..F. .F..F..F
5B80:  F6 E9 03 00 FF 46 F6 8B  46 F6 39 46 EE 7D 03 E9   .....F.. F.9F.}..
5B90:  7B 01 8B 46 FC 89 46 F8  8B 46 F6 39 46 14 75 03   {..F..F. .F.9F.u.
5BA0:  E9 5A 00 8B 46 16 2B 46  0A 89 46 F0 E9 03 00 FF   .Z..F.+F ..F.....
5BB0:  46 F0 8B 46 16 03 46 0A  3B 46 F0 7D 03 E9 3D 00   F..F..F. ;F.}..=.
5BC0:  B8 3C 00 F7 6E F0 8B D8  2B 5E 0A 03 5E 06 8E 46   .<..n... +^..^..F
5BD0:  08 4B 8B 76 F6 26 8A 00  2A E4 8B C8 B8 3C 00 F7   .K.v.&.. *....<..
5BE0:  6E F0 8B D8 03 5E 06 8E  46 08 03 5E 0A 8B 76 F6   n....^.. F..^..v.
5BF0:  26 8A 00 2A E4 2B C1 01  46 F8 E9 B2 FF 8B 46 F8   &..*.+.. F.....F.
5C00:  89 46 FC 8B 46 16 89 46  F2 E9 03 00 FF 46 F2 8B   .F..F..F .....F..
5C10:  46 F2 39 46 EC 7D 03 E9  F0 00 8B 46 F2 39 46 16   F.9F.}.. ...F.9F.
5C20:  75 03 E9 5B 00 8B 46 F6  2B 46 0A 89 46 F0 E9 03   u..[..F. +F..F...
5C30:  00 FF 46 F0 8B 46 0A 03  46 F6 3B 46 F0 7D 03 E9   ..F..F.. F.;F.}..
5C40:  3E 00 8B 46 F2 2B 46 0A  B9 3C 00 F7 E9 8B D0 8B   >..F.+F. .<......
5C50:  46 0A 03 46 F2 8B DA F7  E9 8B D3 C4 5E 06 03 D8   F..F.... ....^...
5C60:  8B 76 F0 26 8A 00 2A E4  C4 5E 06 03 DA 83 EB 3C   .v.&..*. .^.....<
5C70:  8B 76 F0 26 8A 10 2A F6  2B C2 01 46 F8 E9 B1 FF   .v.&..*. +..F....
```

```
5C80:  8B 46 F8 39 46 FA 7C 03  E9 21 00 8B 46 F8 89 46   .F.9F.|. .!..F..F
5C90:  FA 8B 46 F6 89 46 EA C4  5E 0C 26 89 07 8B 46 F2   ..F..F.. ^.&...F.
5CA0:  89 46 FE C4 5E 10 26 89  07 E9 5B 00 8B 46 F8 39   .F..^.&. ..[..F.9
5CB0:  46 FA 74 03 E9 50 00 8B  46 F6 2B 46 EA 50 9A 32   F.t..P.. F.+F.P.2
5CC0:  2C AF 0D 83 C4 02 3B 46  0A 7E 03 E9 39 00 8B 46   ,.....;F .~..9..F
5CD0:  F2 2B 46 FE 50 9A 32 2C  AF 0D 83 C4 02 3B 46 0A   .+F.P.2, .....;F.
5CE0:  7E 03 E9 22 00 8B 46 EA  03 46 F6 99 2B C2 D1 F8   ~.."..F. .F..+...
5CF0:  C4 5E 0C 26 89 07 8B 46  FE 03 46 F2 99 2B C2 D1   .^.&...F ..F..+..
5D00:  F8 C4 5E 10 26 89 07 E9  02 FF E9 77 FE 83 7E FA   ..^.&... ...w..~.
5D10:  00 7F 03 E9 32 00 C4 5E  0C 26 8B 07 8E 06 0E 0B   ....2..^ .&......
5D20:  26 2B 06 8C BF F7 2E D4  00 C4 5E 0C 26 89 07 C4   &+...... ..^.&...
5D30:  5E 10 26 8B 07 8E 06 10  0B 26 2B 06 16 C0 F7 2E   ^.&..... .&+.....
5D40:  D4 00 C4 5E 10 26 89 07  8B 46 FA E9 00 00 5E 5F   ...^.&.. .F....^_
5D50:  8B E5 5D CB 55 8B EC 81  EC 10 00 57 56 8E 06 12   ..].U... ...WV...
5D60:  0B 26 A1 66 08 99 F7 3E  D4 00 89 46 FE 8E 06 14   .&.f...> ...F....
5D70:  0B 26 A1 6C 08 99 F7 3E  D4 00 89 46 FC 8B 46 06   .&.l...> ...F..F.
5D80:  99 F7 3E D4 00 89 46 F8  8B 46 08 99 F7 3E D4 00   ..>...F. .F...>..
5D90:  89 46 F4 FF 76 F8 9A 32  2C AF 0D 83 C4 02 8B 4E   .F..v..2 ,......N
5DA0:  FE 2B 4E 0A 3B C1 7E 03  E9 18 00 FF 76 F4 9A 32   .+N.;.~. ....v..2
5DB0:  2C AF 0D 83 C4 02 8B 4E  FC 2B 4E 0A 3B C1 7F 03   ,......N .+N.;...
5DC0:  E9 06 00 B8 00 00 E9 7F  00 8E 06 0E 0B 26 A1 8C   ........ .....&..
5DD0:  BF 01 46 F8 8E 06 10 0B  26 A1 16 C0 01 46 F4 8B   ..F..... &....F..
5DE0:  46 0A 03 46 F8 89 46 F2  8B 46 0A 03 46 F4 89 46   F..F..F. .F..F..F
5DF0:  F0 8B 46 F8 2B 46 0A 89  46 FA E9 03 00 FF 46 FA   ..F.+F.. F.....F.
5E00:  8B 46 FA 39 46 F2 7F 03  E9 37 00 8B 46 F4 2B 46   .F.9F... .7..F.+F
5E10:  0A 89 46 F6 E9 03 00 FF  46 F6 8B 46 F6 39 46 F0   ..F..... F..F.9F.
5E20:  7F 03 E9 1A 00 B8 3C 00  F7 6E F6 8B D8 03 5E FA   ......<. .n....^.
5E30:  8E 06 1E 0B 8A 46 0C 26  00 87 CA D1 E9 D8 FF E9   .....F.& ........
5E40:  BB FF B8 01 00 E9 00 00  5E 5F 8B E5 5D CB 55 8B   ........ ^_..].U.
5E50:  EC 81 EC 02 00 57 56 B8  1A 00 8E 06 0A 0B 26 F7   .....WV. ......&.
5E60:  2E FA C7 8B D8 8E 06 1A  0B 8B 46 0A 26 89 87 96   ........ ..F.&...
5E70:  D4 B8 1A 00 8E 06 0A 0B  26 F7 2E FA C7 8B D8 8E   ........ &.......
5E80:  06 1A 0B 8B 46 0C 26 89  87 98 D4 8E 06 0A 0B 26   ....F.&. .......&
5E90:  FF 06 FA C7 B8 1A 00 26  F7 2E FA C7 8B D8 8E 06   .......& ........
5EA0:  1A 0B 8B 46 06 26 89 87  96 D4 B8 1A 00 8E 06 0A   ...F.&.. ........
5EB0:  0B 26 F7 2E FA C7 8B D8  8E 06 1A 0B 8B 46 08 26   .&...... .....F.&
5EC0:  89 87 98 D4 B8 1A 00 F7  6E 0C 8B D8 8E 06 18 0B   ........ n.......
5ED0:  26 FF B7 7C 0C B8 1A 00  F7 6E 0C 8B D8 26 FF B7   &..|.... .n...&..
5EE0:  7A 0C B8 1A 00 F7 6E 0A  8B D8 26 FF B7 7C 0C B8   z.....n. ..&..|..
5EF0:  1A 00 F7 6E 0A 8B D8 26  FF B7 7A 0C B8 1A 00 F7   ...n...& ..z.....
5F00:  6E 08 8B D8 8E 06 16 0B  26 FF B7 0E 04 B8 1A 00   n....... &.......
5F10:  F7 6E 08 8B D8 26 FF B7  0C 04 B8 1A 00 F7 6E 06   .n...&.. ......n.
5F20:  8B D8 26 FF B7 0E 04 B8  1A 00 F7 6E 06 8B D8 26   ..&..... ...n...&
5F30:  FF B7 0C 04 9A 8E 01 AA  08 83 C4 10 50 9A 32 2C   ........ ....P.2,
5F40:  AF 0D 83 C4 02 89 46 FE  B8 1A 00 8E 06 0A 0B 26   ......F. .......&
5F50:  F7 2E FA C7 8B D8 8E 06  1A 0B 8B 46 FE 26 89 87   ........ ...F.&..
5F60:  AA D4 B8 1A 00 F7 6E 06  8B D8 8E 06 16 0B 26 8B   ......n. ......&.
5F70:  87 0C 04 8B C8 B8 1A 00  F7 6E 0A 8B D8 8E 06 18   ........ .n......
5F80:  0B 26 2B 8F 7A 0C B8 1A  00 8E 06 0A 0B 26 F7 2E   .&+.z... .....&..
5F90:  FA C7 8B D8 8E 06 1A 0B  26 89 8F 9E D4 B8 1A 00   ........ &.......
5FA0:  F7 6E 08 8B D8 8E 06 16  0B 26 8B 87 0C 04 8B C8   .n...... .&......
5FB0:  B8 1A 00 F7 6E 0C 8B D8  8E 06 18 0B 26 2B 8F 7A   ....n... ....&+.z
5FC0:  0C B8 1A 00 8E 06 0A 0B  26 F7 2E FA C7 8B D8 8E   ........ &.......
```

```
5FD0:  06 1A 0B 26 89 8F A0 D4  B8 1A 00 F7 6E 06 8B D8   ...&.... ....n...
5FE0:  8E 06 16 0B 26 8B 87 0E  04 8B C8 B8 1A 00 F7 6E   ....&... .......n
5FF0:  0A 8B D8 8E 06 18 0B 26  2B 8F 7C 0C B8 1A 00 8E   .......& +.|.....
6000:  06 0A 0B 26 F7 2E FA C7  8B D8 8E 06 1A 0B 26 89   ...&.... ......&.
6010:  8F A2 D4 B8 1A 00 F7 6E  08 8B D8 8E 06 16 0B 26   .......n .......&
6020:  8B 87 0E 04 8B C8 B8 1A  00 F7 6E 0C 8B D8 8E 06   ........ ..n.....
6030:  18 0B 26 2B 8F 7C 0C B8  1A 00 8E 06 0A 0B 26 F7   ..&+.|.. ......&.
6040:  2E FA C7 8B D8 8E 06 1A  0B 26 89 8F A4 D4 B8 1A   ........ .&......
6050:  00 F7 6E 0C 8B D8 8E 06  18 0B B8 1A 00 F7 6E 0A   ..n..... ......n.
6060:  8B F0 26 8B 84 7C 0C 26  2B 87 7C 0C 99 52 50 52   ..&..|.& +.|..RPR
6070:  50 9A 5E 2D AF 0D 8B C8  B8 1A 00 8B DA F7 6E 0C   P.^-.... ......n.
6080:  8B F0 8E 06 18 0B B8 1A  00 F7 6E 0A 8B F8 26 8B   ........ ..n...&.
6090:  85 7A 0C 26 2B 84 7A 0C  99 52 50 52 50 8B F1 8B   .z.&+.z. .RPRP...
60A0:  FB 9A 5E 2D AF 0D 03 F0  13 FA 57 56 9A 22 01 B1   ..^-.... ..WV."..
60B0:  09 83 C4 04 8B C8 B8 1A  00 8E 06 0A 0B 26 F7 2E   ........ .....&..
60C0:  FA C7 8B D8 8E 06 1A 0B  26 89 8F AE D4 B8 1A 00   ........ &.......
60D0:  8E 06 0A 0B 26 F7 2E FA  C7 8B D8 8E 06 1A 0B 8B   ....&... ........
60E0:  46 0E 26 89 87 AC D4 B8  1A 00 8E 06 0A 0B 26 F7   F.&..... ......&.
60F0:  2E FA C7 8B D8 8E 06 1A  0B 26 C7 87 A6 D4 00 00   ........ .&......
6100:  B8 1A 00 8E 06 0A 0B 26  F7 2E FA C7 8B D8 8E 06   .......& ........
6110:  1A 0B 26 C7 87 A8 D4 00  00 8E 06 0A 0B 26 FF 06   ..&..... .....&..
6120:  FA C7 B8 1A 00 26 F7 2E  FA C7 8B D8 8E 06 1A 0B   .....&.. ........
6130:  26 C7 87 96 D4 FF FF 8E  06 0A 0B 26 FF 06 FA C7   &....... ...&....
6140:  8E 06 0C 0B 26 FF 06 38  C1 5E 5F 8B E5 5D CB 55   ....&..8 .^_..].U
6150:  8B EC 81 EC 02 00 57 56  C7 46 FE 01 00 FF 76 06   ......WV .F....v.
6160:  9A 32 2C AF 0D 83 C4 02  8E 06 12 0B 26 3B 06 66   .2,..... ....&;.f
6170:  08 7C 03 E9 7F 00 FF 76  08 9A 32 2C AF 0D 83 C4   .|.....v ..2,....
6180:  02 8E 06 14 0B 26 3B 06  6C 08 7C 03 E9 66 00 8B   .....&;. l.|..f..
6190:  46 08 99 F7 3E D4 00 8E  06 10 0B 26 03 06 16 C0   F...>... ...&....
61A0:  8B C8 D1 E0 D1 E0 03 C1  D1 E0 05 05 00 B9 0A 00   ........ ........
61B0:  99 F7 F9 BB 3C 00 F7 EB  8B D8 8B 46 06 99 F7 3E   ....<... ...F...>
61C0:  D4 00 8E 06 0E 0B 26 03  06 8C BF 8B D0 D1 E0 D1   ......&. ........
61D0:  E0 03 C2 D1 E0 05 05 00  99 F7 F9 03 D8 8E 06 1E   ........ ........
61E0:  0B 8A 46 FE 26 00 87 CA  D1 8B 46 FE 8E 06 08 0B   ..F.&... ..F.....
61F0:  26 01 06 46 EB 5E 5F 8B  E5 5D CB 55 8B EC 81 EC   &..F.^_. .].U....
6200:  08 00 57 56 B8 D6 00 1E  50 B8 D9 00 1E 50 9A 34   ..WV.... P....P.4
6210:  07 AF 0D 83 C4 08 89 46  F8 89 56 FA C7 46 FC 00   .......F ..V..F..
6220:  00 E9 03 00 FF 46 FC A1  56 0D 39 46 FC 7C 03 E9   .....F.. V.9F.|..
6230:  59 00 C7 46 FE 00 00 E9  03 00 FF 46 FE A1 54 0D   Y..F.... ...F..T.
6240:  39 46 FE 7C 03 E9 2D 00  B8 3C 00 F7 6E FC 8B D8   9F.|..-. .<..n...
6250:  03 5E FE 8E 06 1E 0B 26  8A 87 CA D1 2A E4 50 B8   .^.....& ....*.P.
6260:  E3 00 1E 50 FF 76 FA FF  76 F8 9A 50 07 AF 0D 83   ...P.v.. v..P....
6270:  C4 0A E9 C5 FF B8 E8 00  1E 50 FF 76 FA FF 76 F8   ........ .P.v..v.
6280:  9A 50 07 AF 0D 83 C4 08  E9 99 FF FF 76 FA FF 76   .P...... ....v..v
6290:  F8 9A 3A 06 AF 0D 83 C4  04 5E 5F 8B E5 5D CB 00   ..:..... .^_..]..
62A0:  55 8B EC 81 EC 06 00 57  56 C7 46 FC 02 00 C7 46   U......W V.F....F
62B0:  FE 1A 00 8E 06 22 0B 26  83 3E 50 08 01 75 03 E9   .....".& .>P..u..
62C0:  0C 00 B8 00 00 50 9A 0E  00 14 0B 83 C4 02 B8 EA   .....P.. ........
62D0:  E9 B9 AA 14 51 50 B8 00  00 B9 62 23 51 50 9A 51   ....QP.. ..b#QP.Q
62E0:  18 5F 03 83 C4 08 B8 2A  08 B9 AA 14 51 50 B8 6E   ._.....* ....QP.n
62F0:  08 B9 AA 14 51 50 9A 51  18 5F 03 83 C4 08 8E 06   ....QP.Q ._......
6300:  24 0B 26 C7 06 6E EB 00  00 26 C7 06 70 EB 00 00   $.&..n.. .&..p...
6310:  26 C7 06 72 EB 00 00 26  C7 06 74 EB 00 00 B8 00   &..r...& ..t.....
```

```
6320:  00 89 46 FA 26 A3 76 EB  83 7E FA 00 75 03 E9 1E   ..F.&.v. .~..u...
6330:  00 8E 06 26 0B 26 83 3E  F4 00 00 74 03 E9 0F 00   ...&.&.> ...t....
6340:  8E 06 22 0B 26 83 3E 50  08 01 74 03 E9 25 00 B8   ..".&.>P ..t..%..
6350:  01 00 50 9A 20 0B AA 08  83 C4 02 B8 00 00 50 9A   ..P. ... ......P.
6360:  20 0B AA 08 83 C4 02 9A  04 00 5F 03 9A 6C 01 14   ........ .._..l..
6370:  0B 89 46 FA 83 7E FA 00  75 03 E9 1E 00 8E 06 26   ..F..~.. u......&
6380:  0B 26 83 3E F4 00 00 74  03 E9 0F 00 8E 06 22 0B   .&.>...t ......".
6390:  26 83 3E 50 08 01 74 03  E9 08 00 9A 4C 03 0A 06   &.>P..t. ....L...
63A0:  89 46 FA 8E 06 28 0B 26  83 3E EA 00 00 74 03 E9   .F...(.& .>...t..
63B0:  34 00 83 7E FA 00 75 03  E9 1E 00 8E 06 26 0B 26   4..~..u. .....&.&
63C0:  83 3E F4 00 00 74 03 E9  0F 00 8E 06 22 0B 26 83   .>...t.. ....".&.
63D0:  3E 50 08 01 74 03 E9 0D  00 9A A3 11 DE 09 9A B4   >P..t... ........
63E0:  08 14 0B 89 46 FA 83 7E  FA 00 7F 03 E9 06 00 B8   ....F..~ ........
63F0:  01 00 E9 06 00 B8 FF FF  E9 00 00 5E 5F 8B E5 5D   ........ ...^_..]
6400:  CB 55 8B EC 81 EC 00 00  57 56 8E 06 28 0B 26 83   .U...... WV..(.&.
6410:  3E EA 00 00 75 03 E9 1B  00 C7 06 64 0D 00 00 C7   >...u... ...d....
6420:  06 66 0D 62 23 C7 06 68  0D 6E 08 C7 06 6A 0D AA   .f.b#..h .n...j..
6430:  14 E9 18 00 C7 06 64 0D  6E 08 C7 06 66 0D AA 14   ......d. n...f...
6440:  C7 06 68 0D 00 00 C7 06  6A 0D 62 23 5E 5F 8B E5   ..h..... j.b#^_..
6450:  5D CB 55 8B EC 81 EC 04  00 57 56 B8 EA E9 B9 AA   ].U..... .WV.....
6460:  14 51 50 BA 00 00 BB 62  23 53 52 9A D4 1C 5F 03   .QP....b #SR..._.
6470:  83 C4 08 B8 2A 08 B9 AA  14 51 50 B8 6E 08 BA AA   ....*... .QP.n...
6480:  14 52 50 9A D4 1C 5F 03  83 C4 08 8E 06 2A 0B 26   .RP..._. .....*.&
6490:  A1 00 EA 8E 06 2C 0B 26  2B 06 40 08 89 46 FE 83   .....,.& +.@..F..
64A0:  7E FE 00 7F 03 E9 23 00  8B 46 FE F7 D8 50 B8 00   ~.....#. .F...P..
64B0:  00 50 B9 EA E9 BA AA 14  52 51 B9 00 00 BA 62 23   .P...... RQ....b#
64C0:  52 51 50 9A 1E 21 5F 03  83 C4 0E 83 7E FE 00 7C   RQP..!_. ....~..|
64D0:  03 E9 23 00 FF 76 FE B8  00 00 50 B8 2A 08 B9 AA   ..#..v.. ..P.*...
64E0:  14 51 50 B8 6E 08 B9 AA  14 51 50 B8 01 00 50 9A   .QP.n... .QP...P.
64F0:  1E 21 5F 03 83 C4 0E 8E  06 2A 0B 26 A1 02 EA 8E   .!_..... .*.&....
6500:  06 2C 0B 26 2B 06 42 08  89 46 FC 83 7E FC 00 7F   .,.&+.B. .F..~...
6510:  03 E9 20 00 FF 76 FC B8  02 00 50 B8 2A 08 06 50   .. ..v.. ..P.*..P
6520:  B8 6E 08 B9 AA 14 51 50  B8 01 00 50 9A 1E 21 5F   .n....QP ...P..!_
6530:  03 83 C4 0E 83 7E FC 00  7C 03 E9 26 00 8B 46 FC   .....~.. |..&..F.
6540:  F7 D8 50 B8 02 00 50 B8  EA E9 B9 AA 14 51 50 B8   ..P...P. .....QP.
6550:  00 00 B9 62 23 51 50 B8  00 00 50 9A 1E 21 5F 03   ...b#QP. ..P..!_.
6560:  83 C4 0E 5E 5F 8B E5 5D  CB 55 8B EC 81 EC 02 00   ...^_..] .U......
6570:  57 56 C7 46 FE 00 00 E9  03 00 FF 46 FE 8E 06 2E   WV.F.... ...F....
6580:  0B 8B 46 FE 26 39 06 70  08 7F 03 E9 1E 00 B8 1A   ..F.&9.p ........
6590:  00 8B 5E FE 8B CB D1 E3  03 D9 D1 E3 26 F7 AF D6   ..^..... ....&...
65A0:  A4 8B D8 26 83 A7 92 0C  F9 E9 CE FF C7 46 FE 00   ...&.... .....F..
65B0:  00 E9 03 00 FF 46 FE 8E  06 30 0B 8B 46 FE 26 39   .....F.. .0..F.&9
65C0:  06 02 00 7F 03 E9 1E 00  B8 1A 00 8B 5E FE 8B CB   ........ ....^...
65D0:  D1 E3 03 D9 D1 E3 26 F7  AF 68 9C 8B D8 26 83 A7   ......&. .h...&..
65E0:  24 04 F9 E9 CE FF 5E 5F  8B E5 5D CB 55 8B EC 81   $.....^_ ..].U...
65F0:  EC 14 00 57 56 9A 61 01  0A 06 B8 00 00 8E 06 24   ...WV.a. .......$
6600:  0B 26 A3 58 EB 26 A3 56  EB 26 A3 54 EB 26 A3 66   .&.X.&.V .&.T.&.f
6610:  EB B8 00 00 26 A3 5C EB  26 A3 5A EB B8 00 00 26   ....&.\. &.Z....&
6620:  A3 5E EB 26 A3 60 EB B8  00 00 26 A3 64 EB 26 A3   .^.&.`.. ..&.d.&.
6630:  62 EB 8E 06 28 0B 26 83  3E EA 00 00 75 03 E9 1B   b...(.&. >...u...
6640:  00 B8 EA E9 B9 AA 14 51  50 B8 00 00 B9 62 23 51   .......Q P....b#Q
6650:  50 9A BB 16 5F 03 83 C4  08 E9 18 00 B8 2A 08 B9   P..._... .....*..
6660:  AA 14 51 50 B8 6E 08 B9  AA 14 51 50 9A BB 16 5F   ..QP.n.. ..QP..._
```

```
6670:  03 83 C4 08 9A B2 01 0A  06 9A C9 02 0A 06 C7 46   ........ .......F
6680:  F0 00 00 E9 03 00 FF 46  F0 C4 1E 64 0D 8B 46 F0   .......F ...d..F.
6690:  26 39 07 7F 03 E9 1E 04  C7 46 FA FF FF 8B 76 F0   &9...... .F....v.
66A0:  D1 E6 C4 1E 64 0D 26 8B  40 24 89 46 F8 B8 01 00   ....d.&. @$.F....
66B0:  50 8D 46 F8 16 50 8D 46  FA 16 50 A1 64 0D 8B 16   P.F..P.F ..P.d...
66C0:  66 0D 05 0C 04 52 50 9A  B1 25 0A 06 83 C4 0E 40   f....RP. .%.....@
66D0:  74 03 E9 03 00 E9 AE FF  B8 FF FF 89 46 F4 89 46   t....... ....F..F
66E0:  F6 C7 46 EE 00 00 8D 46  F2 16 50 8D 46 F4 16 50   ..F....F ..P.F..P
66F0:  8D 4E F6 16 51 FF 76 F8  FF 76 FA 9A CE 0D 0A 06   .N..Q.v. .v......
6700:  83 C4 10 3D 00 00 75 03  E9 D7 02 FF 76 F4 FF 76   ...=..u. ....v..v
6710:  F6 FF 76 F8 FF 76 FA 9A  7D 0A 0A 06 83 C4 08 8E   ..v..v.. }.......
6720:  06 26 0B 26 83 3E F4 00  00 74 03 E9 3B 00 8E 06   .&.&.>.. .t..;...
6730:  22 0B 26 83 3E 50 08 01  75 03 E9 2C 00 8E 06 24   ".&.>P.. u..,...$
6740:  0B 26 A1 54 EB B9 03 00  99 F7 F9 83 FA 02 74 03   .&.T.... ......t.
6750:  E9 16 00 9A 9C 04 14 0B  89 46 EC 3D 00 00 7F 03   ........ .F.=....
6760:  E9 06 00 8B 46 EC E9 55  03 FF 76 F4 FF 76 F6 A1   ....F..U ..v..v..
6770:  68 0D 8B 16 6A 0D 05 24  00 52 50 A1 68 0D 8B 16   h...j..$ .RP.h...
6780:  6A 0D 05 0C 04 52 50 FF  76 F8 FF 76 FA A1 64 0D   j....RP. v..v..d.
6790:  8B 16 66 0D 05 24 00 52  50 A1 64 0D 8B 16 66 0D   ..f..$.R P.d...f.
67A0:  05 0C 04 52 50 9A 2C 25  0A 06 83 C4 18 8E 06 28   ...RP.,% .......(
67B0:  0B 26 83 3E EA 00 00 75  03 E9 19 00 FF 76 F4 FF   .&.>...u .....v..
67C0:  76 F6 FF 76 F8 FF 76 FA  9A 82 1D 25 00 83 C4 08   v..v..v. ...%....
67D0:  C7 46 EE 01 00 B8 1A 00  F7 6E FA 8B F0 C4 1E 64   .F...... .n.....d
67E0:  0D 26 F6 80 24 04 08 74  03 E9 5F 00 B8 1A 00 F7   .&..$..t .._.....
67F0:  6E F6 8B F0 C4 1E 68 0D  26 F6 80 24 04 08 75 03   n.....h. &..$..u.
6800:  E9 48 00 B8 1A 00 F7 6E  F6 8B F0 C4 1E 68 0D 26   .H.....n .....h.&
6810:  8A 80 24 04 24 06 3C 06  72 03 E9 2E 00 FF 76 F4   ..$.$.<. r.....v.
6820:  FF 76 F6 A1 68 0D 8B 16  6A 0D 05 0C 04 52 50 A1   .v..h... j....RP.
6830:  68 0D 8B 16 6A 0D 05 24  00 52 50 FF 36 6A 0D FF   h...j..$ .RP.6j..
6840:  36 68 0D 9A FD 11 0A 06  83 C4 10 B8 1A 00 F7 6E   6h...... .......n
6850:  FA 8B F0 C4 1E 64 0D 26  F6 80 24 04 08 75 03 E9   .....d.& ..$..u..
6860:  62 00 B8 1A 00 F7 6E F6  8B F0 C4 1E 68 0D 26 F6   b.....n. ....h.&.
6870:  80 24 04 08 74 03 E9 4B  00 B8 1A 00 F7 6E FA 8B   .$..t..K .....n..
6880:  F0 C4 1E 64 0D 26 8A 80  24 04 24 06 3C 06 72 03   ...d.&.. $.$.<.r.
6890:  E9 31 00 FF 76 F8 FF 76  FA A1 64 0D 8B 16 66 0D   .1..v..v ..d...f.
68A0:  05 0C 04 52 50 A1 64 0D  8B 16 66 0D 05 24 00 52   ...RP.d. ..f..$.R
68B0:  50 FF 36 66 0D FF 36 64  0D 9A FD 11 0A 06 83 C4   P.6f..6d ........
68C0:  10 FF 4E F0 C7 46 FC 00  00 8E 06 28 0B 26 83 3E   ..N..F.. ...(.&.>
68D0:  EA 00 00 75 03 E9 7B 00  8D 46 F4 16 50 8D 46 F6   ...u..{. .F..P.F.
68E0:  16 50 8D 46 F8 16 50 8D  46 FA 16 50 9A 86 09 0A   .P.F..P. F..P....
68F0:  06 83 C4 10 89 46 FE C7  46 EE 00 00 83 7E FE 00   .....F.. F....~..
6900:  7C 03 E9 03 00 E9 CB 00  8D 46 F4 16 50 8D 46 F6   |....... .F..P.F.
6910:  16 50 A1 68 0D 8B 16 6A  0D 05 0C 04 52 50 FF 76   .P.h...j ....RP.v
6920:  F8 FF 76 FA 9A 84 2C 25  00 83 C4 10 3D 00 00 74   ..v...,% ....=..t
6930:  03 E9 03 00 E9 9C 00 FF  76 F4 FF 76 F6 FF 76 F8   ........ v..v..v.
6940:  FF 76 FA 9A 82 1D 25 00  83 C4 08 C7 46 EE 01 00   .v....%. ....F...
6950:  E9 44 00 8D 46 F4 16 50  8D 46 F6 16 50 8D 46 F8   .D..F..P .F..P.F.
6960:  16 50 8D 46 FA 16 50 9A  24 08 0A 06 83 C4 10 40   .P.F..P. $......@
6970:  74 03 E9 03 00 E9 5B 00  FF 76 F4 FF 76 F6 FF 76   t.....[. .v..v..v
6980:  F8 FF 76 FA 9A B5 1F 0A  06 83 C4 08 3D 00 00 74   ..v..... ....=..t
6990:  03 E9 03 00 E9 3C 00 8E  06 24 0B 26 FF 06 5E EB   .....<.. .$.&..^.
69A0:  FF 46 FC 26 FF 06 66 EB  8B 46 FC 26 39 06 60 EB   .F.&..f. .F.&9.`.
69B0:  7C 03 E9 07 00 8B 46 FC  26 A3 60 EB FF 76 F4 FF   |.....F. &.`..v..
```

```
69C0:  76 F6 FF 76 F8 FF 76 FA  9A 7D 0A 0A 06 83 C4 08   v..v..v. .}......
69D0:  E9 F6 FE 83 7E F8 FF 74  03 E9 03 00 E9 03 00 E9   ....~..t ........
69E0:  04 FD 8E 06 28 0B 26 83  3E EA 00 00 75 03 E9 94   ....(.&. >...u...
69F0:  00 83 7E EE 00 74 03 E9  8B 00 83 7E F8 FF 75 03   ..~..t.. ...~..u.
6A00:  E9 82 00 FF 76 F8 FF 76  FA 9A D6 05 25 00 83 C4   ....v..v ....%...
6A10:  04 B8 1A 00 F7 6E FA 8B  F0 C4 1E 64 0D 26 8A 80   .....n.. ...d.&..
6A20:  24 04 04 02 8B C8 B8 1A  00 F7 6E FA 8B F0 C4 1E   $....... ..n.....
6A30:  64 0D 26 32 88 24 04 83  E1 06 B8 1A 00 F7 6E FA   d.&2.$.. ......n.
6A40:  8B F0 C4 1E 64 0D 26 31  88 24 04 B8 1A 00 F7 6E   ....d.&1 .$.....n
6A50:  F8 8B F0 C4 1E 64 0D 26  8A 80 24 04 04 02 8B C8   .....d.& ..$.....
6A60:  B8 1A 00 F7 6E F8 8B F0  C4 1E 64 0D 26 32 88 24   ....n... ..d.&2.$
6A70:  04 83 E1 06 B8 1A 00 F7  6E F8 8B F0 C4 1E 64 0D   ........ n.....d.
6A80:  26 31 88 24 04 B8 01 00  50 8D 46 F8 16 50 8D 46   &1.$.... P.F..P.F
6A90:  FA 16 50 A1 64 0D 8B 16  66 0D 05 0C 04 52 50 9A   ..P.d... f....RP.
6AA0:  B1 25 0A 06 83 C4 0E 40  74 03 E9 03 00 E9 03 00   .%.....@ t.......
6AB0:  E9 2E FC E9 D0 FB 9A 9C  04 14 0B E9 00 00 5E 5F   ........ ......^_
6AC0:  8B E5 5D CB 55 8B EC 81  EC 00 00 57 56 B8 1A 00   ..].U... ...WV...
6AD0:  C4 5E 0A 26 F7 2F 8B F0  C4 1E 64 0D 26 F6 80 24   .^.&./.. ..d.&..$
6AE0:  04 08 75 03 E9 4E 00 B8  1A 00 C4 5E 12 26 F7 2F   ..u..N.. ...^.&./
6AF0:  8B F0 C4 1E 68 0D 26 F6  80 24 04 08 74 03 E9 34   ....h.&. .$..t..4
6B00:  00 C4 5E 06 26 FF 37 C4  5E 0A 26 FF 37 A1 64 0D   ..^.&.7. ^.&.7.d.
6B10:  8B 16 66 0D 05 0C 04 52  50 A1 64 0D 8B 16 66 0D   ..f....R P.d...f.
6B20:  05 24 00 52 50 FF 36 66  0D FF 36 64 0D 9A FD 11   .$.RP.6f ..6d....
6B30:  0A 06 83 C4 10 B8 1A 00  C4 5E 0A 26 F7 2F 8B F0   ........ .^.&./..
6B40:  C4 1E 64 0D 26 F6 80 24  04 08 74 03 E9 6B 00 B8   ..d.&..$ ..t..k..
6B50:  1A 00 C4 5E 12 26 F7 2F  8B F0 C4 1E 68 0D 26 F6   ...^.&./ ....h.&.
6B60:  80 24 04 08 75 03 E9 51  00 B8 1A 00 C4 5E 12 26   .$..u..Q .....^.&
6B70:  F7 2F 8B F0 C4 1E 68 0D  26 8A 80 24 04 24 06 3C   ./....h. &..$.$.<
6B80:  06 72 03 E9 34 00 C4 5E  0E 26 FF 37 C4 5E 12 26   .r..4..^ .&.7.^.&
6B90:  FF 37 A1 68 0D 8B 16 6A  0D 05 0C 04 52 50 A1 68   .7.h...j ....RP.h
6BA0:  0D 8B 16 6A 0D 05 24 00  52 50 FF 36 6A 0D FF 36   ...j..$. RP.6j..6
6BB0:  68 0D 9A FD 11 0A 06 83  C4 10 B8 01 00 50 FF 76   h....... .....P.v
6BC0:  0C FF 76 0A FF 76 08 FF  76 06 A1 64 0D 8B 16 66   ..v..v.. v..d...f
6BD0:  0D 05 0C 04 52 50 9A B1  25 0A 06 83 C4 0E 40 74   ....RP.. %.....@t
6BE0:  03 E9 06 00 B8 FF FF E9  36 00 B8 01 00 50 FF 76   ........ 6....P.v
6BF0:  14 FF 76 12 FF 76 10 FF  76 0E A1 68 0D 8B 16 6A   ..v..v.. v..h...j
6C00:  0D 05 0C 04 52 50 9A B1  25 0A 06 83 C4 0E 40 74   ....RP.. %.....@t
6C10:  03 E9 06 00 B8 FF FF E9  06 00 B8 00 00 E9 00 00   ........ ........
6C20:  5E 5F 8B E5 5D CB 55 8B  EC 81 EC 04 00 57 56 C7   ^_..].U. .....WV.
6C30:  46 FE 01 00 C7 46 FC 01  00 B8 1A 00 C4 5E 0A 26   F....F.. .....^.&
6C40:  F7 2F 8B F0 C4 1E 64 0D  26 83 B8 20 04 FF 75 03   ./....d. &.. ..u.
6C50:  E9 1F 00 B8 1A 00 C4 5E  12 26 F7 2F 8B F0 C4 1E   .......^ .&./....
6C60:  68 0D 26 83 B8 20 04 FF  74 03 E9 05 00 C7 46 FE   h.&.. .. t.....F.
6C70:  00 00 B8 1A 00 C4 5E 0A  26 F7 2F 8B F0 C4 1E 64   ......^. &./....d
6C80:  0D 26 83 B8 20 04 FF 74  03 E9 1F 00 B8 1A 00 C4   .&.. ..t ........
6C90:  5E 12 26 F7 2F 8B F0 C4  1E 68 0D 26 83 B8 20 04   ^.&./... .h.&.. .
6CA0:  FF 75 03 E9 05 00 C7 46  FC 00 00 FF 76 FE FF 76   .u.....F ....v..v
6CB0:  0C FF 76 0A FF 76 08 FF  76 06 A1 64 0D 8B 16 66   ..v..v.. v..d...f
6CC0:  0D 05 0C 04 52 50 9A B1  25 0A 06 83 C4 0E 40 74   ....RP.. %.....@t
6CD0:  03 E9 0E 00 C4 5E 0A 26  C7 07 FF FF B8 FF FF E9   .....^.& ........
6CE0:  35 00 FF 76 FC FF 76 14  FF 76 12 FF 76 10 FF 76   5..v..v. .v..v..v
6CF0:  0E A1 68 0D 8B 16 6A 0D  05 0C 04 52 50 9A B1 25   ..h...j. ...RP..%
6D00:  0A 06 83 C4 0E 40 74 03  E9 06 00 B8 FE FF E9 06   .....@t. ........
```

```
6D10:  00 B8 00 00 E9 00 00 5E  5F 8B E5 5D CB 55 8B EC   .......^ _..].U..
6D20:  81 EC 08 00 57 56 B8 1A  00 F7 6E 0A 8B F0 C4 1E   ....WV.. ..n.....
6D30:  68 0D 26 8A 80 24 04 04  02 8B C8 B8 1A 00 F7 6E   h.&..$.. .......n
6D40:  0A 8B F0 C4 1E 68 0D 26  32 88 24 04 83 E1 06 B8   .....h.& 2.$.....
6D50:  1A 00 F7 6E 0A 8B F0 C4  1E 68 0D 26 31 88 24 04   ...n.... .h.&1.$.
6D60:  B8 1A 00 F7 6E 0C 8B F0  C4 1E 68 0D 26 8A 80 24   ....n... ..h.&..$
6D70:  04 04 02 8B C8 B8 1A 00  F7 6E 0C 8B F0 C4 1E 68   ........ .n.....h
6D80:  0D 26 32 88 24 04 83 E1  06 B8 1A 00 F7 6E 0C 8B   .&2.$... .....n..
6D90:  F0 C4 1E 68 0D 26 31 88  24 04 B8 1A 00 F7 6E 06   ...h.&1. $.....n.
6DA0:  8B F0 C4 1E 64 0D 26 8A  80 24 04 04 02 8B C8 B8   ....d.&. .$......
6DB0:  1A 00 F7 6E 06 8B F0 C4  1E 64 0D 26 32 88 24 04   ...n.... .d.&2.$.
6DC0:  83 E1 06 B8 1A 00 F7 6E  06 8B F0 C4 1E 64 0D 26   .......n .....d.&
6DD0:  31 88 24 04 B8 1A 00 F7  6E 08 8B F0 C4 1E 64 0D   1.$..... n.....d.
6DE0:  26 8A 80 24 04 04 02 8B  C8 B8 1A 00 F7 6E 08 8B   &..$.... .....n..
6DF0:  F0 C4 1E 64 0D 26 32 88  24 04 83 E1 06 B8 1A 00   ...d.&2. $.......
6E00:  F7 6E 08 8B F0 C4 1E 64  0D 26 31 88 24 04 B8 1A   .n.....d .&1.$...
6E10:  00 F7 6E 06 8B F0 C4 1E  64 0D 26 8A 80 24 04 24   ..n..... d.&..$.$
6E20:  06 3C 04 73 03 E9 09 00  8E 06 24 0B 26 FF 06 58   .<.s.... ..$.&..X
6E30:  EB B8 1A 00 F7 6E 08 8B  F0 C4 1E 64 0D 26 8A 80   .....n.. ...d.&..
6E40:  24 04 24 06 3C 04 73 03  E9 09 00 8E 06 24 0B 26   $.$.<.s. .....$.&
6E50:  FF 06 58 EB 8E 06 24 0B  26 FF 06 54 EB 26 FF 06   ..X...$. &..T.&..
6E60:  66 EB B8 1A 00 F7 6E 08  8B F0 C4 1E 64 0D 26 8B   f.....n. ....d.&.
6E70:  80 1A 04 89 46 FE B8 1A  00 F7 6E 08 8B F0 C4 1E   ....F... ..n.....
6E80:  64 0D B8 1A 00 F7 6E 06  8B F8 8B C3 8C C1 C4 1E   d.....n. ........
6E90:  64 0D 8C C2 8E C1 8B CB  8B D8 26 8B 80 0E 04 8E   d....... ..&.....
6EA0:  C2 8B D9 26 2B 81 0E 04  F7 D8 99 52 50 52 50 9A   ...&+... ...RPRP.
6EB0:  5E 2D AF 0D 8B C8 B8 1A  00 8B DA F7 6E 08 8B F0   ^-...... ....n...
6EC0:  8B C3 C4 1E 64 0D 8B D0  B8 1A 00 8B FA F7 6E 06   ....d... ......n.
6ED0:  8B D6 8B F0 8B C3 C4 1E  64 0D 26 8B 80 0C 04 8B   ........ d.&.....
6EE0:  F2 C4 1E 64 0D 26 2B 80  0C 04 99 52 50 52 50 8B   ...d.&+. ...RPRP.
6EF0:  F1 9A 5E 2D AF 0D 03 F0  13 FA 57 56 9A 22 01 B1   ..^-.... ..WV."..
6F00:  09 83 C4 04 89 46 F8 8B  46 F8 3D 01 00 7C 03 E9   .....F.. F.=..|..
6F10:  03 00 B8 01 00 99 52 50  8B 46 FE 99 52 50 52 50   ......RP .F..RPRP
6F20:  9A 5E 2D AF 0D 52 50 9A  C4 2C AF 0D 3D 10 27 7F   .^-..RP. .,..=.'.
6F30:  03 E9 03 00 B8 10 27 89  46 FA 83 7E FE 32 7F 03   ......'. F..¯.2..
6F40:  E9 18 00 8B 46 FA 99 F7  7E FE 3D 02 00 7D 03 E9   ....F... ¯.=..}..
6F50:  09 00 8E 06 24 0B 26 FF  06 62 EB 8E 06 24 0B 8B   ....$.&. .b...$..
6F60:  46 FA 26 39 06 64 EB 7C  03 E9 07 00 8B 46 FA 26   F.&9.d.| .....F.&
6F70:  A3 64 EB B8 1A 00 F7 6E  06 8B F0 C4 1E 64 0D 26   .d.....n .....d.&
6F80:  F6 80 24 04 01 75 03 E9  5C 00 B8 1A 00 F7 6E 08   ..$..u.. \.....n.
6F90:  8B F0 C4 1E 64 0D 26 F6  80 24 04 01 75 03 E9 45   ....d.&. .$..u..E
6FA0:  00 B8 1A 00 F7 6E 0A 8B  F0 C4 1E 68 0D 26 F6 80   .....n.. ...h.&..
6FB0:  24 04 01 75 03 E9 2E 00  B8 1A 00 F7 6E 0C 8B F0   $..u.... ....n...
6FC0:  C4 1E 68 0D 26 F6 80 24  04 01 75 03 E9 17 00 83   ..h.&..$ ..u.....
6FD0:  7E FE 28 7F 03 E9 0E 00  8E 06 24 0B 26 FF 06 56   ¯.(..... ..$.&..V
6FE0:  EB 26 FF 06 66 EB B8 1A  00 F7 6E 06 8B F0 C4 1E   .&..f... ..n.....
6FF0:  64 0D 26 F6 80 24 04 01  75 03 E9 17 00 B8 1A 00   d.&..$.. u.......
7000:  F7 6E 0A 8B F0 C4 1E 68  0D 26 F6 80 24 04 01 74   .n.....h .&..$..t
7010:  03 E9 37 00 B8 1A 00 F7  6E 08 8B F0 C4 1E 64 0D   ..7..... n.....d.
7020:  26 F6 80 24 04 01 75 03  E9 31 00 B8 1A 00 F7 6E   &..$..u. .1.....n
7030:  0C 8B F0 C4 1E 68 0D 26  F6 80 24 04 01 75 03 E9   .....h.& ..$..u..
7040:  1A 00 83 7E FE 28 7F 03  E9 11 00 8B 46 FE 8E 06   ...¯.(.. ....F...
7050:  24 0B 26 01 06 5C EB 26  FF 06 66 EB 8B 46 FE 8E   $.&..\.& ..f..F..
```

```
7060:  06 24 0B 26 01 06 5A EB  5E 5F 8B E5 5D CB 55 8B   .$.&..Z. ^_..].U.
7070:  EC 81 EC 20 00 57 56 B8  1A 00 F7 6E 06 8B F0 C4   .... .WV. ...n....
7080:  1E 64 0D 26 83 B8 16 04  FF 75 03 E9 06 00 B8 01   .d.&.... .u......
7090:  00 E9 03 00 B8 00 00 8B  C8 B8 1A 00 F7 6E 06 8B   ........ .....n..
70A0:  F0 C4 1E 64 0D 89 4E E2  26 83 B8 10 04 FF 75 03   ...d..N. &.....u.
70B0:  E9 06 00 B8 01 00 E9 03  00 B8 00 00 8B C8 B8 1A   ........ ........
70C0:  00 F7 6E 06 8B F0 C4 1E  64 0D 89 4E E0 26 83 B8   ..n..... d..N.&..
70D0:  1C 04 FF 75 03 E9 06 00  B8 01 00 E9 03 00 B8 00   ...u.... ........
70E0:  00 03 46 E0 03 46 E2 8B  C8 B8 1A 00 F7 6E 06 8B   ..F..F.. .....n..
70F0:  F0 C4 1E 64 0D 26 8A 80  24 04 25 06 00 D0 E8 3B   ...d.&.. $.%....;
7100:  C8 74 03 E9 06 00 B8 00  00 E9 8B 03 B8 1A 00 F7   .t...... ........
7110:  6E 08 8B F0 C4 1E 64 0D  26 83 B8 1C 04 FF 75 03   n.....d. &.....u.
7120:  E9 06 00 B8 01 00 E9 03  00 B8 00 00 8B C8 B8 1A   ........ ........
7130:  00 F7 6E 08 8B F0 C4 1E  64 0D 89 4E E0 26 83 B8   ..n..... d..N.&..
7140:  16 04 FF 75 03 E9 06 00  B8 01 00 E9 03 00 B8 00   ...u.... ........
7150:  00 8B C8 B8 1A 00 F7 6E  08 8B F0 C4 1E 64 0D 89   .......n .....d..
7160:  4E E2 26 83 B8 10 04 FF  75 03 E9 06 00 B8 01 00   N.&..... u.......
7170:  E9 03 00 B8 00 00 03 46  E2 03 46 E0 8B C8 B8 1A   .......F ..F.....
7180:  00 F7 6E 08 8B F0 C4 1E  64 0D 26 8A 80 24 04 25   ..n..... d.&..$.%
7190:  06 00 D0 E8 3B C8 74 03  E9 06 00 B8 00 00 E9 F6   ....;.t. ........
71A0:  02 B8 1A 00 F7 6E 06 8B  F0 C4 1E 64 0D 26 8B 80   .....n.. ...d.&..
71B0:  0C 04 89 46 EE B8 1A 00  F7 6E 06 8B F0 C4 1E 64   ...F.... .n.....d
71C0:  0D 26 8B 80 0E 04 89 46  F0 B8 1A 00 F7 6E 08 8B   .&.....F .....n..
71D0:  F0 C4 1E 64 0D 26 8B 80  0C 04 89 46 E6 B8 1A 00   ...d.&.. ...F....
71E0:  F7 6E 08 8B F0 C4 1E 64  0D 26 8B 80 0E 04 89 46   .n.....d .&.....F
71F0:  E8 B8 1A 00 F7 6E 06 8B  F0 C4 1E 64 0D 8B 46 08   .....n.. ...d..F.
7200:  26 39 80 16 04 74 03 E9  06 00 B8 01 00 E9 22 00   &9...t.. ......".
7210:  B8 1A 00 F7 6E 06 8B F0  C4 1E 64 0D 8B 46 08 26   ....n... ..d..F.&
7220:  39 80 10 04 74 03 E9 06  00 B8 00 00 E9 03 00 B8   9...t... ........
7230:  02 00 89 46 FC B8 1A 00  F7 6E 08 8B F0 C4 1E 64   ...F.... .n.....d
7240:  0D 8B 46 06 26 39 80 16  04 74 03 E9 06 00 B8 01   ..F.&9.. .t......
7250:  00 E9 22 00 B8 1A 00 F7  6E 08 8B F0 C4 1E 64 0D   .."..... n.....d.
7260:  8B 46 06 26 39 80 10 04  74 03 E9 06 00 B8 00 00   .F.&9... t.......
7270:  E9 03 00 B8 02 00 89 46  F8 B8 FF FF 89 46 FE 89   .......F .....F..
7280:  46 E4 C4 5E 12 26 C7 07  B8 0B FF 76 14 FF 76 12   F..^.&.. ...v..v.
7290:  8D 46 EA 16 50 FF 76 F8  FF 76 E8 FF 76 E6 FF 76   .F..P.v. .v..v..v
72A0:  08 8D 4E F4 16 51 FF 76  FC FF 76 F0 FF 76 EE FF   ..N..Q.v ..v..v..
72B0:  76 06 9A 31 16 0A 06 83  C4 1C 89 46 E4 83 7E E4   v..1.... ...F..~.
72C0:  04 74 03 E9 18 00 8B 46  F4 C4 5E 0A 26 89 07 8B   .t.....F ..^.&...
72D0:  46 EA C4 5E 0E 26 89 07  B8 01 00 E9 B9 01 C4 5E   F..^.&.. .......^
72E0:  12 26 8B 07 89 46 EC FF  76 14 FF 76 12 8D 46 F6   .&...F.. v..v..F.
72F0:  16 50 FF 76 FC FF 76 F0  FF 76 EE FF 76 06 8D 4E   .P.v..v. .v..v..N
7300:  F2 16 51 FF 76 F8 FF 76  E8 FF 76 E6 FF 76 08 9A   ..Q.v..v ..v..v..
7310:  31 16 0A 06 83 C4 1C 89  46 FE 83 7E FE 04 74 03   1....... F..~..t.
7320:  E9 18 00 8B 46 F6 C4 5E  0A 26 89 07 8B 46 F2 C4   ....F..^ .&...F..
7330:  5E 0E 26 89 07 B8 01 00  E9 5C 01 8E 06 28 0B 26   ^.&..... .\...(.&
7340:  83 3E EA 00 00 75 03 E9  06 00 B8 00 00 E9 47 01   .>...u.. ......G.
7350:  83 7E E4 01 74 03 E9 38  01 83 7E FE 01 74 03 E9   .~..t..8 ..~..t..
7360:  2F 01 B8 1A 00 F7 6E F6  8B F0 C4 1E 68 0D B8 1A   /.....n. ....h...
7370:  00 F7 6E EA 8B F8 8B C3  8C C1 C4 1E 68 0D 8C C2   ..n..... ....h...
7380:  8E C1 8B CB 8B D8 26 8B  80 0C 04 8E C2 8B D9 26   ......&. .......&
7390:  2B 81 0C 04 F7 D8 99 52  50 52 50 9A 5E 2D AF 0D   +......R PRP.^-..
73A0:  8B C8 B8 1A 00 8B DA F7  6E F6 8B F0 8B C3 C4 1E   ........ n.......
```

```
73B0:  68 0D 8B D0 B8 1A 00 8B  FA F7 6E EA 8B D6 8B F0   h....... ..n.....
73C0:  8B C3 C4 1E 68 0D 26 8B  80 0E 04 8B F2 C4 1E 68   ....h.&. .......h
73D0:  0D 26 2B 80 0E 04 99 52  50 52 50 8B F1 9A 5E 2D   .&+....R PRP...^-
73E0:  AF 0D 03 F0 13 FA 57 56  9A 22 01 B1 09 83 C4 04   ......WV .".....
73F0:  89 46 FA 83 7E FA 14 7C  03 E9 95 00 B8 1A 00 F7   .F..~..| ........
7400:  6E F4 8B F0 C4 1E 68 0D  26 8A 80 24 04 04 02 8B   n.....h. &..$....
7410:  C8 B8 1A 00 F7 6E F4 8B  F0 C4 1E 68 0D 26 32 88   .....n.. ...h.&2.
7420:  24 04 83 E1 06 B8 1A 00  F7 6E F4 8B F0 C4 1E 68   $....... .n.....h
7430:  0D 26 31 88 24 04 B8 1A  00 F7 6E EA 8B F0 C4 1E   .&1.$... ..n.....
7440:  68 0D 26 8A 80 24 04 04  02 8B C8 B8 1A 00 F7 6E   h.&..$.. .......n
7450:  EA 8B F0 C4 1E 68 0D 26  32 88 24 04 83 E1 06 B8   .....h.& 2.$.....
7460:  1A 00 F7 6E EA 8B F0 C4  1E 68 0D 26 31 88 24 04   ...n.... .h.&1.$.
7470:  8B 46 F6 C4 5E 0A 26 89  07 8B 46 F2 C4 5E 0E 26   .F..^.&. ..F..^.&
7480:  89 07 8B 46 EC C4 5E 12  26 01 07 B8 01 00 E9 06   ...F..^. &.......
7490:  00 B8 00 00 E9 00 00 5E  5F 8B E5 5D CB 55 8B EC   .......^ _..].U..
74A0:  81 EC 0C 00 57 56 B8 1A  00 F7 6E 12 8B F0 C4 5E   ....WV.. ..n....^
74B0:  0E 26 8B 40 10 8B C8 B8  1A 00 F7 6E 12 8B F0 C4   .&.@.... ...n....
74C0:  5E 0E 26 39 48 04 75 03  E9 4A 00 B8 1A 00 F7 6E   ^.&9H.u. .J.....n
74D0:  12 8B F0 C4 5E 0E 26 8B  40 0A 8B C8 B8 1A 00 F7   ....^.&. @.......
74E0:  6E 12 8B F0 C4 5E 0E 26  39 48 04 75 03 E9 25 00   n....^.& 9H.u..%.
74F0:  B8 1A 00 F7 6E 12 8B F0  C4 5E 0E 26 8B 40 10 8B   ....n... .^.&.@..
7500:  C8 B8 1A 00 F7 6E 12 8B  F0 C4 5E 0E 26 39 48 0A   .....n.. ..^.&9H.
7510:  74 03 E9 06 00 B8 00 00  E9 B0 03 C7 46 F4 00 00   t....... ....F...
7520:  E9 03 00 FF 46 F4 83 7E  F4 03 7C 03 E9 29 00 B8   ....F..~ ..|..)..
7530:  1A 00 F7 6E 12 8B 76 F4  8B CE D1 E6 03 F1 D1 E6   ...n..v. ........
7540:  03 F0 C4 5E 0E 26 83 78  04 FF 74 03 E9 06 00 B8   ...^.&.x ..t.....
7550:  00 00 E9 76 03 E9 CB FF  B8 1A 00 F7 6E 12 8B F0   ...v.... ....n...
7560:  C4 5E 0E 26 83 60 18 F7  C7 46 FE 01 00 B8 1A 00   .^.&.`.. .F......
7570:  F7 6E 12 8B F0 C4 5E 0E  8B 46 14 26 39 40 04 74   .n....^. .F.&9@.t
7580:  03 E9 0A 00 C7 46 FE 00  00 C7 46 F8 02 00 B8 1A   .....F.. ..F.....
7590:  00 F7 6E 12 8B F0 C4 5E  0E 8B 46 14 26 39 40 10   ..n....^ ..F.&9@.
75A0:  74 03 E9 0A 00 C7 46 FE  02 00 C7 46 F8 00 00 83   t.....F. ...F....
75B0:  7E FE 00 75 03 E9 09 00  83 7E FE 02 74 03 E9 D0   ~..u.... .~..t...
75C0:  01 C7 46 FA 00 00 C4 5E  06 8B 46 FA 26 39 07 7F   ..F....^ ..F.&9..
75D0:  03 E9 17 00 8B 5E FA D1  E3 C4 76 0A 26 83 38 FF   .....^.. ..v.&.8.
75E0:  75 03 E9 06 00 FF 46 FA  E9 DB FF 8B 5E FA D1 E3   u.....F. ....^...
75F0:  C4 76 0A 8B 46 12 26 89  00 C4 5E 06 26 FF 07 B8   .v..F.&. ..^.&...
7600:  1A 00 F7 6E 12 8B F0 C4  5E 0E 26 8B 40 0A 89 46   ...n.... ^.&.@..F
7610:  F6 B8 1A 00 F7 6E F6 8B  F0 C4 5E 0E 8B 46 12 26   .....n.. ..^..F.&
7620:  39 40 04 74 03 E9 59 00  B8 1A 00 F7 6E 12 8B 76   9@.t..Y. ....n..v
7630:  F8 8B CE D1 E6 03 F1 D1  E6 03 F0 C4 5E 0E 26 8B   ........ ....^.&.
7640:  40 04 8B C8 B8 1A 00 F7  6E F6 8B F0 C4 5E 0E 26   @....... n....^.&
7650:  89 48 04 B8 1A 00 F7 6E  12 8B 76 F8 8B CE D1 E6   .H.....n ..v.....
7660:  03 F1 D1 E6 03 F0 C4 5E  0E 26 8B 40 08 8B C8 B8   .......^ .&.@....
7670:  1A 00 F7 6E F6 8B F0 C4  5E 0E 26 01 48 08 E9 56   ...n.... ^.&.H..V
7680:  00 B8 1A 00 F7 6E 12 8B  76 F8 8B CE D1 E6 03 F1   .....n.. v.......
7690:  D1 E6 03 F0 C4 5E 0E 26  8B 40 04 8B C8 B8 1A 00   .....^.& .@......
76A0:  F7 6E F6 8B F0 C4 5E 0E  26 89 48 10 B8 1A 00 F7   .n....^. &.H.....
76B0:  6E 12 8B 76 F8 8B CE D1  E6 03 F1 D1 E6 03 F0 C4   n..v.... ........
76C0:  5E 0E 26 8B 40 08 8B C8  B8 1A 00 F7 6E F6 8B F0   ^.&.@... ....n...
76D0:  C4 5E 0E 26 01 48 14 B8  1A 00 F7 6E 12 8B 76 F8   .^.&.H.. ...n..v.
76E0:  8B CE D1 E6 03 F1 D1 E6  03 F0 C4 5E 0E B8 1A 00   ........ ...^....
76F0:  26 F7 68 04 8B F0 C4 5E  0E 8B 46 F6 26 89 40 0A   &.h....^ ..F.&.@.
```

```
7700:  B8 1A 00 F7 6E 12 8B F0  C4 5E 0E 26 8B 40 0E 8B   ....n... .^.&.@..
7710:  C8 B8 1A 00 F7 6E 12 8B  76 F8 8B D6 D1 E6 03 F2   .....n.. v.......
7720:  D1 E6 03 F0 C4 5E 0E B8  1A 00 26 F7 68 04 8B F0   .....^.. ..&.h...
7730:  C4 5E 0E 26 01 48 0E 83  7E FE 02 74 03 E9 2C 00   .^.&.H.. ~..t..,.
7740:  B8 1A 00 F7 6E 12 03 46  0E 8B 56 10 05 10 00 8B   ....n..F ..V.....
7750:  C8 B8 1A 00 8B DA F7 6E  12 8B F0 8B C3 C4 5E 0E   .......n ......^.
7760:  1E 8D 78 04 8B F1 8E D8  A5 A5 A5 1F B8 1A 00 F7   ..x..... ........
7770:  6E 12 8B F0 C4 5E 0E 26  C7 40 10 FF FF B8 1A 00   n....^.& .@......
7780:  F7 6E 12 8B F0 C4 5E 0E  26 C7 40 0A FF FF E9 3A   .n....^. &.@....:
7790:  01 B8 1A 00 F7 6E 12 8B  F0 C4 5E 0E 26 8B 40 10   .....n.. ..^.&.@.
77A0:  8B C8 B8 1A 00 F7 6E 12  8B F0 C4 5E 0E B8 1A 00   ......n. ...^....
77B0:  26 F7 68 04 8B F0 C4 5E  0E 26 89 48 0A B8 1A 00   &.h....^ .&.H....
77C0:  F7 6E 12 8B F0 C4 5E 0E  26 8B 40 14 8B C8 B8 1A   .n....^. &.@.....
77D0:  00 F7 6E 12 8B F0 C4 5E  0E B8 1A 00 26 F7 68 04   ..n....^ ....&.h.
77E0:  8B F0 C4 5E 0E 26 01 48  0E B8 1A 00 F7 6E 12 8B   ...^.&.H .....n..
77F0:  F0 C4 5E 0E 26 8B 40 04  8B C8 B8 1A 00 F7 6E 12   ..^.&.@. ......n.
7800:  8B F0 C4 5E 0E B8 1A 00  26 F7 68 10 8B F0 C4 5E   ...^.... &.h....^
7810:  0E 26 89 48 0A B8 1A 00  F7 6E 12 8B F0 C4 5E 0E   .&.H.... .n....^.
7820:  26 8B 40 08 8B C8 B8 1A  00 F7 6E 12 8B F0 C4 5E   &.@..... ..n....^
7830:  0E B8 1A 00 26 F7 68 10  8B F0 C4 5E 0E 26 01 48   ....&.h. ...^.&.H
7840:  0E B8 F4 FF 50 B8 1A 00  F7 6E 12 8B F0 C4 5E 0E   ....P... .n....^.
7850:  26 FF 70 10 FF 76 10 FF  76 0E 9A 17 06 AA 08 83   &.p..v.. v.......
7860:  C4 08 89 46 FC C7 46 FA  00 00 C4 5E 06 8B 46 FA   ...F..F. ...^..F.
7870:  26 39 07 7F 03 E9 17 00  8B 5E FA D1 E3 C4 76 0A   &9...... .^....v.
7880:  26 83 38 FF 75 03 E9 06  00 FF 46 FA E9 DB FF 8B   &.8.u... ..F.....
7890:  5E FA D1 E3 C4 76 0A 8B  46 FC 26 89 00 C4 5E 06   ^....v.. F.&...^.
78A0:  26 FF 07 B8 1A 00 F7 6E  12 8B F0 C4 5E 0E 26 C7   &......n ....^.&.
78B0:  40 10 FF FF B8 1A 00 F7  6E 12 8B F0 C4 5E 0E 26   @....... n....^.&
78C0:  C7 40 04 FF FF B8 01 00  E9 00 00 5E 5F 8B E5 5D   .@...... ...^_..]
78D0:  CB 55 8B EC 81 EC 6E 00  57 56 B8 30 75 89 46 EE   .U....n. WV.0u.F.
78E0:  89 46 F6 C4 5E 1E 26 89  07 C7 46 C0 0A 00 B8 00   .F..^.&. ..F.....
78F0:  00 89 46 A8 89 46 CE 8D  46 AA 16 50 8D 46 B6 16   ..F..F.. F..P.F..
7900:  50 9A FD 05 5B 0C 83 C4  08 B8 1A 00 F7 6E 06 8B   P...[... .....n..
7910:  F0 C4 1E 64 0D 26 F6 80  24 04 08 75 03 E9 20 00   ...d.&.. $..u.. .
7920:  8D 46 98 16 50 B8 1A 00  F7 6E 06 03 06 64 0D 8B   .F..P... .n...d..
7930:  16 66 0D 05 10 04 52 50  9A 0A 00 89 08 83 C4 08   .f....RP ........
7940:  B8 1A 00 F7 6E 12 8B F0  C4 1E 64 0D 26 F6 80 24   ....n... ..d.&..$
7950:  04 08 75 03 E9 20 00 8D  46 FA 16 50 B8 1A 00 F7   ..u.. .. F..P....
7960:  6E 12 03 06 64 0D 8B 16  66 0D 05 10 04 52 50 9A   n...d... f....RP.
7970:  0A 00 89 08 83 C4 08 B8  1A 00 F7 6E 06 8B F0 8B   ........ ...n....
7980:  46 0C 8B C8 D1 E0 03 C1  D1 E0 03 F0 C4 1E 64 0D   F....... ......d.
7990:  26 8B 80 14 04 89 46 CA  C4 1E 68 0D 26 8B 47 02   &.....F. ..h.&.G.
79A0:  48 50 8B 46 08 2D 14 00  50 A1 68 0D 8B 16 6A 0D   HP.F.-.. P.h...j.
79B0:  2D 9C 63 52 50 9A 97 01  89 08 83 C4 08 89 46 D8   -.cRP... ......F.
79C0:  8B 46 D8 89 46 C4 E9 03  00 FF 46 C4 C4 1E 68 0D   .F..F... ..F...h.
79D0:  8B 46 C4 26 39 47 02 7F  03 E9 61 07 8B 76 C4 8B   .F.&9G.. ..a..v..
79E0:  C6 D1 E6 03 F0 D1 E6 C4  1E 68 0D 26 8B 80 64 9C   ........ .h.&..d.
79F0:  2B 46 08 89 46 EC 83 7E  EC 28 7F 03 E9 03 00 E9   +F..F..~ .(......
7A00:  3B 07 8B 76 C4 8B C6 D1  E6 03 F0 D1 E6 C4 1E 68   ;..v.... .......h
7A10:  0D 26 8B 80 66 9C 2B 46  0A 89 46 E0 83 7E E0 28   .&..f.+F ..F..~.(
7A20:  7F 03 E9 03 00 E9 A1 FF  83 7E E0 D8 7C 03 E9 03   ........ .~..|...
7A30:  00 E9 95 FF 8B 76 C4 8B  C6 D1 E6 03 F0 D1 E6 C4   .....v.. ........
7A40:  1E 68 0D 26 8B 80 68 9C  89 46 C6 B8 1A 00 F7 6E   .h.&..h. .F.....n
```

B_ENROLL.DMP Tuesday, July 13, 1993 1:12 pm Page 38


```
7A50:  C6 8B F0 C4 1E 68 0D 26  F6 80 24 04 08 74 03 E9   .....h.& ..$..t..
7A60:  20 00 B8 1A 00 F7 6E C6  8B F0 C4 1E 68 0D 26 8A    .....n. ....h.&.
7A70:  80 24 04 24 06 3C 02 73  03 E9 03 00 E9 4A FF E9   .$.$.<.s .....J..
7A80:  71 00 B8 1A 00 F7 6E C6  8B F0 C4 1E 68 0D 26 8A   q.....n. ....h.&.
7A90:  80 24 04 24 06 3C 06 74  03 E9 03 00 E9 2A FF B8   .$.$.<.t .....*..
7AA0:  1A 00 F7 6E 06 8B F0 C4  1E 64 0D 26 F6 80 24 04   ...n.... .d.&..$.
7AB0:  08 75 03 E9 3D 00 8D 46  F0 16 50 B8 1A 00 F7 6E   .u..=..F ..P....n
7AC0:  C6 03 06 68 0D 8B 16 6A  0D 05 10 04 52 50 9A 0A   ...h...j ....RP..
7AD0:  00 89 08 83 C4 08 8D 46  98 16 50 8D 46 F0 16 50   .......F ..P.F..P
7AE0:  9A FC 00 89 08 83 C4 08  3D 00 00 74 03 E9 03 00   ........ =..t....
7AF0:  E9 D6 FE C7 46 BC 00 00  E9 03 00 FF 46 BC 83 7E   ....F... ....F..~
7B00:  BC 03 7C 03 E9 33 06 C7  46 D6 00 00 B8 1A 00 F7   ..|..3.. F.......
7B10:  6E C6 8B F0 8B 46 BC 8B  C8 D1 E0 03 C1 D1 E0 03   n....F.. ........
7B20:  F0 C4 1E 68 0D 26 8B 80  10 04 89 46 BE 83 7E BE   ...h.&.. ...F..~.
7B30:  FF 74 03 E9 03 00 E9 C2  FF B8 1A 00 F7 6E BE 8B   .t...... .....n..
7B40:  F0 C4 1E 68 0D 26 F6 80  24 04 08 75 03 E9 17 00   ...h.&.. $..u....
7B50:  B8 1A 00 F7 6E 12 8B F0  C4 1E 64 0D 26 F6 80 24   ....n... ..d.&..$
7B60:  04 08 75 03 E9 8A 00 B8  1A 00 F7 6E 12 8B F0 C4   ..u..... ...n....
7B70:  1E 64 0D 26 F6 80 24 04  08 75 03 E9 17 00 B8 1A   .d.&..$. .u......
7B80:  00 F7 6E BE 8B F0 C4 1E  68 0D 26 F6 80 24 04 08   ..n..... h.&..$..
7B90:  75 03 E9 5C 00 B8 1A 00  F7 6E C6 8B F0 C4 1E 68   u..\.... .n.....h
7BA0:  0D 26 F6 80 24 04 08 75  03 E9 17 00 B8 1A 00 F7   .&..$..u ........
7BB0:  6E 06 8B F0 C4 1E 64 0D  26 F6 80 24 04 08 75 03   n.....d. &..$..u.
7BC0:  E9 2E 00 B8 1A 00 F7 6E  06 8B F0 C4 1E 64 0D 26   .......n .....d.&
7BD0:  F6 80 24 04 08 75 03 E9  1A 00 B8 1A 00 F7 6E C6   ..$..u.. ......n.
7BE0:  8B F0 C4 1E 68 0D 26 F6  80 24 04 08 74 03 E9 03   ....h.&. .$..t...
7BF0:  00 FF 46 D6 B8 1A 00 F7  6E BE 8B F0 C4 1E 68 0D   ..F..... n.....h.
7C00:  26 F6 80 24 04 08 74 03  E9 20 00 B8 1A 00 F7 6E   &..$..t. . .....n
7C10:  BE 8B F0 C4 1E 68 0D 26  8A 80 24 04 24 06 3C 02   .....h.& ..$.$.<.
7C20:  74 03 E9 03 00 E9 D3 FE  E9 71 00 B8 1A 00 F7 6E   t....... .q.....n
7C30:  BE 8B F0 C4 1E 68 0D 26  8A 80 24 04 24 06 3C 06   .....h.& ..$.$.<.
7C40:  74 03 E9 03 00 E9 B3 FE  B8 1A 00 F7 6E 12 8B F0   t....... ....n...
7C50:  C4 1E 64 0D 26 F6 80 24  04 08 75 03 E9 3D 00 8D   ..d.&..$ ..u..=..
7C60:  46 E6 16 50 B8 1A 00 F7  6E BE 03 06 68 0D 8B 16   F..P.... n...h...
7C70:  6A 0D 05 10 04 52 50 9A  0A 00 89 08 83 C4 08 8D   j....RP. ........
7C80:  46 FA 16 50 8D 46 E6 16  50 9A FC 00 89 08 83 C4   F..P.F.. P.......
7C90:  08 3D 00 00 74 03 E9 03  00 E9 5F FE 8E 06 28 0B   .=..t... .._...(.
7CA0:  26 83 3E EA 00 00 75 03  E9 2F 00 FF 76 C6 FF 76   &.>...u. ./..v..v
7CB0:  06 9A 25 21 25 00 83 C4  04 3D 00 00 75 03 E9 16   ..%!%... .=..u...
7CC0:  00 FF 76 BE FF 76 12 9A  25 21 25 00 83 C4 04 3D   ..v..v.. %!%....=
7CD0:  00 00 74 03 E9 03 00 E9  21 FE B8 1A 00 F7 6E C6   ..t..... !.....n.
7CE0:  8B F0 C4 1E 68 0D 26 8B  80 0C 04 89 46 B0 B8 1A   ....h.&. ....F...
7CF0:  00 F7 6E C6 8B F0 C4 1E  68 0D 26 8B 80 0E 04 89   ..n..... h.&.....
7D00:  46 B2 B8 1A 00 F7 6E BE  8B F0 C4 1E 68 0D 26 8B   F.....n. ....h.&.
7D10:  80 0C 04 89 46 A4 B8 1A  00 F7 6E BE 8B F0 C4 1E   ....F... ..n.....
7D20:  68 0D 26 8B 80 0E 04 89  46 A6 B8 1A 00 F7 6E BE   h.&..... F.....n.
7D30:  8B F0 C4 1E 68 0D 8B 46  C6 26 39 80 16 04 74 03   ....h..F .&9...t.
7D40:  E9 06 00 B8 01 00 E9 22  00 B8 1A 00 F7 6E BE 8B   ......." .....n..
7D50:  F0 C4 1E 68 0D 8B 46 C6  26 39 80 10 04 74 03 E9   ...h..F. &9...t..
7D60:  06 00 B8 00 00 E9 03 00  B8 02 00 89 46 C8 B8 1A   ........ ....F...
7D70:  00 F7 6E BE 8B 76 C8 8B  CE D1 E6 03 F1 D1 E6 03   ..n..v.. ........
7D80:  F0 C4 1E 68 0D 26 8B 80  14 04 89 46 AE B8 1A 00   ...h.&.. ...F....
7D90:  F7 6E 06 8B F0 8B 46 0C  8B C8 D1 E0 03 C1 D1 E0   .n....F. ........
```

```
7DA0:  03 F0 C4 1E 64 0D 26 8B  80 12 04 89 46 C2 B8 1A   ....d.&. ....F...
7DB0:  00 F7 6E 12 8B 76 18 8B  CE D1 E6 03 F1 D1 E6 03   ..n..v.. ........
7DC0:  F0 C4 1E 64 0D 26 8B 80  12 04 89 46 BA B8 1A 00   ...d.&.. ...F....
7DD0:  F7 6E C6 8B F0 8B 46 BC  8B C8 D1 E0 03 C1 D1 E0   .n....F. ........
7DE0:  03 F0 C4 1E 68 0D 26 8B  80 12 04 89 46 A2 B8 1A   ....h.&. ....F...
7DF0:  00 F7 6E BE 8B 76 C8 8B  CE D1 E6 03 F1 D1 E6 03   ..n..v.. ........
7E00:  F0 C4 1E 68 0D 26 8B 80  12 04 89 46 9E 8B 46 A4   ...h.&.. ...F..F.
7E10:  2B 46 14 89 46 E2 8B 46  A6 2B 46 16 89 46 DA C7   +F..F..F .+F..F..
7E20:  46 B4 01 00 FF 76 E2 9A  32 2C AF 0D 83 C4 02 3D   F....v.. 2,.....=
7E30:  28 00 7E 03 E9 13 00 FF  76 DA 9A 32 2C AF 0D 83   (.~..... v..2,...
7E40:  C4 02 3D 28 00 7F 03 E9  05 00 C7 46 B4 00 00 8B   ..=(.... ...F....
7E50:  46 A2 2B 46 C2 89 46 B8  81 7E B8 B4 00 7F 03 E9   F.+F..F. .~......
7E60:  09 00 8B 46 B8 2D 68 01  E9 16 00 81 7E B8 4C FF   ...F.-h. ....~.L.
7E70:  7D 03 E9 06 00 8B 46 B8  E9 06 00 8B 46 B8 05 68   }.....F. ....F..h
7E80:  01 50 9A 32 2C AF 0D 83  C4 02 89 46 B8 83 7E B8   .P.2,... ...F..~.
7E90:  12 7F 03 E9 03 00 E9 62  FC 8B 46 AE 2B 46 CA 50   .......b ..F.+F.P
7EA0:  9A 32 2C AF 0D 83 C4 02  89 46 DC 83 7E DC 28 7F   .2,..... .F..~.(.
7EB0:  03 E9 05 00 C7 46 B4 00  00 8B 46 9E 2B 46 BA 89   .....F.. ..F.+F..
7EC0:  46 AC 81 7E AC B4 00 7F  03 E9 09 00 8B 46 AC 2D   F..~.... .....F.-
7ED0:  68 01 E9 16 00 81 7E AC  4C FF 7D 03 E9 06 00 8B   h.....~. L.}.....
7EE0:  46 AC E9 06 00 8B 46 AC  05 68 01 50 9A 32 2C AF   F.....F. .h.P.2,.
7EF0:  0D 83 C4 02 89 46 AC 83  7E AC 12 7F 03 E9 05 00   .....F.. ~.......
7F00:  C7 46 B4 00 00 8B 46 B0  2B 46 08 99 52 50 52 50   .F....F. +F..RPRP
7F10:  9A 5E 2D AF 0D 8B C8 8B  46 B2 2B 46 0A 8B DA 99   .^-..... F.+F....
7F20:  52 50 52 50 8B F1 8B FB  9A 5E 2D AF 0D 03 F0 13   RPRP.... .^-.....
7F30:  FA 57 56 9A 22 01 B1 09  83 C4 04 89 46 A0 8B 46   .WV."... ....F..F
7F40:  A4 2B 46 14 99 52 50 52  50 9A 5E 2D AF 0D 8B C8   .+F..RPR P.^-....
7F50:  8B 46 A6 2B 46 16 8B DA  99 52 50 52 50 8B F1 8B   .F.+F... .RPRP...
7F60:  FB 9A 5E 2D AF 0D 03 F0  13 FA 57 56 9A 22 01 B1   ..^-.... ..WV"..
7F70:  09 83 C4 04 89 46 94 FF  76 16 FF 76 14 FF 76 0A   .....F.. v..v..v.
7F80:  FF 76 08 FF 76 A6 FF 76  A4 FF 76 B2 FF 76 B0 9A   .v..v..v ..v..v..
7F90:  8E 01 AA 08 83 C4 10 89  46 D2 B8 1A 00 F7 6E C6   ........ F.....n.
7FA0:  8B F0 C4 1E 68 0D 26 F6  80 24 04 01 75 03 E9 5E   ....h.&. .$..u..^
7FB0:  00 B8 1A 00 F7 6E BE 8B  F0 C4 1E 68 0D 26 F6 80   .....n.. ...h.&..
7FC0:  24 04 01 75 03 E9 47 00  B8 1A 00 F7 6E 06 8B F0   $..u..G. ....n...
7FD0:  C4 1E 64 0D 26 F6 80 24  04 01 75 03 E9 30 00 B8   ..d.&..$ ..u..0..
7FE0:  1A 00 F7 6E 12 8B F0 C4  1E 64 0D 26 F6 80 24 04   ...n.... .d.&..$.
7FF0:  01 75 03 E9 19 00 B8 14  00 F7 6E CA B9 64 00 99   .u...... ..n..d..
8000:  F7 F9 3B 46 DC 7C 03 E9  05 00 C7 46 B4 00 00 FF   ..;F.|.. ...F....
8010:  76 D2 9A 32 2C AF 0D 83  C4 02 3D 12 00 7F 03 E9   v..2,... ..=.....
8020:  05 00 C7 46 B4 00 00 B8  1A 00 F7 6E 06 8B F0 C4   ...F.... ...n....
8030:  1E 64 0D 26 F6 80 24 04  01 75 03 E9 26 00 B8 1A   .d.&..$. .u..&...
8040:  00 F7 6E C6 8B F0 C4 1E  68 0D 26 F6 80 24 04 01   ..n..... h.&..$..
8050:  75 03 E9 0F 00 83 7E A0  14 7F 03 E9 03 00 E9 9A   u.....~. ........
8060:  FA E9 0C 00 83 7E A0 28  7F 03 E9 03 00 E9 8B FA   .....~.( ........
8070:  B8 1A 00 F7 6E 12 8B F0  C4 1E 64 0D 26 F6 80 24   ....n... ..d.&..$
8080:  04 01 75 03 E9 28 00 B8  1A 00 F7 6E BE 8B F0 C4   ..u..(.. ...n....
8090:  1E 68 0D 26 F6 80 24 04  01 75 03 E9 11 00 83 7E   .h.&..$. .u.....~
80A0:  94 14 7F 03 E9 05 00 C7  46 B4 00 00 E9 0E 00 83   ........ F.......
80B0:  7E 94 28 7F 03 E9 05 00  C7 46 B4 00 00 8B 46 B8   ~.(..... .F....F.
80C0:  03 46 A0 89 46 E4 8B 46  AC 03 46 94 03 46 DC 89   .F..F..F ..F..F..
80D0:  46 DE 8B 46 D2 03 46 DE  03 46 E4 89 46 D0 83 7E   F..F..F. .F..F..~
80E0:  B4 00 75 03 E9 2E 00 C4  5E 1E 8B 46 D0 26 39 07   ..u..... ^..F.&9.
```

```
80F0:  7F 03 E9 20 00 8B 46 D6  89 46 C0 8B 46 D0 C4 5E   ... ..F. .F..F..^
8100:  1E 26 89 07 8B 46 C6 89  46 96 8B 46 BE 89 46 F8   .&...F.. F..F..F.
8110:  C7 46 A8 01 00 8B 46 F6  39 46 E4 7C 03 E9 17 00   .F....F. 9F.|....
8120:  8B 46 E4 89 46 F6 8B 46  C6 89 46 D4 8B 46 BE 89   .F..F..F ..F..F..
8130:  46 CC C7 46 CE 01 00 E9  C1 F9 E9 8C F8 83 7E A8   F..F.... ......~.
8140:  00 75 03 E9 81 00 B8 1A  00 F7 6E 96 8B F0 C4 1E   .u...... ..n.....
8150:  68 0D 26 F6 80 24 04 01  75 03 E9 59 00 B8 1A 00   h.&..$.. u..Y....
8160:  F7 6E F8 8B F0 C4 1E 68  0D 26 F6 80 24 04 01 75   .n.....h .&..$..u
8170:  03 E9 42 00 B8 1A 00 F7  6E 06 8B F0 C4 1E 64 0D   ..B..... n.....d.
8180:  26 F6 80 24 04 01 75 03  E9 2B 00 B8 1A 00 F7 6E   &..$..u. .+.....n
8190:  12 8B F0 C4 1E 64 0D 26  F6 80 24 04 01 75 03 E9   .....d.& ..$..u..
81A0:  14 00 C4 5E 1E 26 83 3F  46 7F 03 E9 05 00 C7 46   ...^.&.? F......F
81B0:  A8 00 00 E9 11 00 C4 5E  1E 26 83 3F 64 7F 03 E9   .......^ .&.?d...
81C0:  05 00 C7 46 A8 00 00 83  7E A8 00 75 03 E9 18 00   ...F.... ~..u....
81D0:  8B 46 96 C4 5E 0E 26 89  07 8B 46 F8 C4 5E 1A 26   .F..^.&. ..F..^.&
81E0:  89 07 B8 04 00 E9 67 00  83 7E CE 00 75 03 E9 58   ......g. .~..u..X
81F0:  00 B8 1A 00 F7 6E D4 8B  F0 C4 1E 68 0D 26 F6 80   .....n.. ...h.&..
8200:  24 04 01 75 03 E9 41 00  B8 1A 00 F7 6E 06 8B F0   $..u..A. ....n...
8210:  C4 1E 64 0D 26 F6 80 24  04 01 75 03 E9 2A 00 83   ..d.&..$ ..u..*..
8220:  7E F6 1E 7E 03 E9 21 00  8B 46 D4 C4 5E 0E 26 89   ~..~..!. .F..^.&.
8230:  07 8B 46 CC C4 5E 1A 26  89 07 8B 46 F6 C4 5E 1E   ..F..^.& ...F..^.
8240:  26 89 07 B8 01 00 E9 06  00 B8 FF FF E9 00 00 5E   &....... .......^
8250:  5F 8B E5 5D CB 55 8B EC  81 EC 22 00 57 56 B8 1A   _..].U.. ..".WV..
8260:  00 F7 6E 06 8B F0 C4 1E  64 0D 26 83 B8 16 04 FF   ..n..... d.&.....
8270:  75 03 E9 06 00 B8 01 00  E9 03 00 B8 00 00 8B C8   u....... ........
8280:  B8 1A 00 F7 6E 06 8B F0  C4 1E 64 0D 89 4E E0 26   ....n... ..d..N.&
8290:  83 B8 10 04 FF 75 03 E9  06 00 B8 01 00 E9 03 00   .....u.. ........
82A0:  B8 00 00 8B C8 B8 1A 00  F7 6E 06 8B F0 C4 1E 64   ........ .n.....d
82B0:  0D 89 4E DE 26 83 B8 1C  04 FF 75 03 E9 06 00 B8   ..N.&... ..u.....
82C0:  01 00 E9 03 00 B8 00 00  03 46 DE 03 46 E0 8B C8   ........ .F..F...
82D0:  B8 1A 00 F7 6E 06 8B F0  C4 1E 64 0D 26 8A 80 24   ....n... ..d.&..$
82E0:  04 25 06 00 D0 E8 3B C8  74 03 E9 06 00 B8 00 00   .%....;. t.......
82F0:  E9 D3 04 B8 1A 00 F7 6E  08 8B F0 C4 1E 64 0D 26   .......n .....d.&
8300:  83 B8 16 04 FF 75 03 E9  06 00 B8 01 00 E9 03 00   .....u.. ........
8310:  B8 00 00 8B C8 B8 1A 00  F7 6E 08 8B F0 C4 1E 64   ........ .n.....d
8320:  0D 89 4E DE 26 83 B8 10  04 FF 75 03 E9 06 00 B8   ..N.&... ..u.....
8330:  01 00 E9 03 00 B8 00 00  8B C8 B8 1A 00 F7 6E 08   ........ ......n.
8340:  8B F0 C4 1E 64 0D 89 4E  E0 26 83 B8 1C 04 FF 75   ....d..N .&.....u
8350:  03 E9 06 00 B8 01 00 E9  03 00 B8 00 00 03 46 E0   ........ ......F.
8360:  03 46 DE 8B C8 B8 1A 00  F7 6E 08 8B F0 C4 1E 64   .F...... .n.....d
8370:  0D 26 8A 80 24 04 25 06  00 D0 E8 3B C8 74 03 E9   .&..$.%. ...;.t..
8380:  06 00 B8 00 00 E9 3E 04  B8 1A 00 F7 6E 0A 8B F0   ......>. ....n...
8390:  C4 1E 68 0D 26 83 B8 16  04 FF 75 03 E9 06 00 B8   ..h.&... ..u.....
83A0:  01 00 E9 03 00 B8 00 00  8B C8 B8 1A 00 F7 6E 0A   ........ ......n.
83B0:  8B F0 C4 1E 68 0D 89 4E  DE 26 83 B8 10 04 FF 75   ....h..N .&.....u
83C0:  03 E9 06 00 B8 01 00 E9  03 00 B8 00 00 8B C8 B8   ........ ........
83D0:  1A 00 F7 6E 0A 8B F0 C4  1E 68 0D 89 4E E0 26 83   ...n.... .h..N.&.
83E0:  B8 1C 04 FF 75 03 E9 06  00 B8 01 00 E9 03 00 B8   ....u... ........
83F0:  00 00 03 46 E0 03 46 DE  8B C8 B8 1A 00 F7 6E 0A   ...F..F. ......n.
8400:  8B F0 C4 1E 68 0D 26 8A  80 24 04 25 06 00 D0 E8   ....h.&. .$.%....
8410:  3B C8 74 03 E9 06 00 B8  00 00 E9 A9 03 B8 1A 00   ;.t..... ........
8420:  F7 6E 0C 8B F0 C4 1E 68  0D 26 83 B8 16 04 FF 75   .n.....h .&.....u
8430:  03 E9 06 00 B8 01 00 E9  03 00 B8 00 00 8B C8 B8   ........ ........
```

```
8440:  1A 00 F7 6E 0C 8B F0 C4  1E 68 0D 89 4E DE 26 83   ...n.... .h..N.&.
8450:  B8 10 04 FF 75 03 E9 06  00 B8 01 00 E9 03 00 B8   ....u... ........
8460:  00 00 8B C8 B8 1A 00 F7  6E 0C 8B F0 C4 1E 68 0D   ........ n.....h.
8470:  89 4E E0 26 83 B8 1C 04  FF 75 03 E9 06 00 B8 01   .N.&.... .u......
8480:  00 E9 03 00 B8 00 00 03  46 E0 03 46 DE 8B C8 B8   ........ F..F....
8490:  1A 00 F7 6E 0C 8B F0 C4  1E 68 0D 26 8A 80 24 04   ...n.... .h.&..$.
84A0:  25 06 00 D0 E8 3B C8 74  03 E9 06 00 B8 00 00 E9   %....;.t ........
84B0:  14 03 B8 1A 00 F7 6E 06  8B F0 C4 1E 64 0D 8B 46   ......n. ....d..F
84C0:  08 26 39 80 16 04 74 03  E9 06 00 B8 01 00 E9 22   .&9...t. ......."
84D0:  00 B8 1A 00 F7 6E 06 8B  F0 C4 1E 64 0D 8B 46 08   .....n.. ...d..F.
84E0:  26 39 80 10 04 74 03 E9  06 00 B8 00 00 E9 03 00   &9...t.. ........
84F0:  B8 02 00 89 46 FA B8 1A  00 F7 6E 0A 8B F0 C4 1E   ....F... ..n.....
8500:  68 0D 8B 46 0C 26 39 80  16 04 74 03 E9 06 00 B8   h..F.&9. ..t.....
8510:  01 00 E9 22 00 B8 1A 00  F7 6E 0A 8B F0 C4 1E 68   ..."..... .n.....h
8520:  0D 8B 46 0C 26 39 80 10  04 74 03 E9 06 00 B8 00   ..F.&9.. .t......
8530:  00 E9 03 00 B8 02 00 89  46 F4 B8 1A 00 F7 6E 08   ........ F.....n.
8540:  8B F0 C4 1E 64 0D 8B 46  06 26 39 80 16 04 74 03   ....d..F .&9...t.
8550:  E9 06 00 B8 01 00 E9 22  00 B8 1A 00 F7 6E 08 8B   ......." .....n..
8560:  F0 C4 1E 64 0D 8B 46 06  26 39 80 10 04 74 03 E9   ...d..F. &9...t..
8570:  06 00 B8 00 00 E9 03 00  B8 02 00 89 46 F8 B8 1A   ........ ....F...
8580:  00 F7 6E 0C 8B F0 C4 1E  68 0D 8B 46 0A 26 39 80   ..n..... h..F.&9.
8590:  16 04 74 03 E9 06 00 B8  01 00 E9 22 00 B8 1A 00   ..t..... ..."....
85A0:  F7 6E 0C 8B F0 C4 1E 68  0D 8B 46 0A 26 39 80 10   .n.....h ..F.&9..
85B0:  04 74 03 E9 06 00 B8 00  00 E9 03 00 B8 02 00 89   .t...... ........
85C0:  46 F0 B8 1A 00 F7 6E 08  8B F0 C4 1E 64 0D 26 8B   F.....n. ....d.&.
85D0:  80 0C 04 89 46 E8 B8 1A  00 F7 6E 08 8B F0 C4 1E   ....F... ..n.....
85E0:  64 0D 26 8B 80 0E 04 89  46 EA B8 1A 00 F7 6E 0C   d.&..... F.....n.
85F0:  8B F0 C4 1E 68 0D 26 8B  80 0C 04 89 46 E2 B8 1A   ....h.&. ....F...
8600:  00 F7 6E 0C 8B F0 C4 1E  68 0D 26 8B 80 0E 04 89   ..n..... h.&.....
8610:  46 E4 B8 1A 00 F7 6E 0A  8B F0 8B 46 F4 8B C8 D1   F.....n. ...F....
8620:  E0 03 C1 D1 E0 03 F0 C4  1E 68 0D 26 8B 80 12 04   ........ .h.&....
8630:  8B C8 B8 1A 00 F7 6E 06  8B 76 FA 8B D6 D1 E6 03   ......n. .v......
8640:  F2 D1 E6 03 F0 C4 1E 64  0D 26 2B 88 12 04 89 4E   .......d .&+....N
8650:  F2 81 7E F2 B4 00 7F 03  E9 09 00 8B 46 F2 2D 68   ..~..... ....F.-h
8660:  01 E9 16 00 81 7E F2 4C  FF 7D 03 E9 06 00 8B 46   .....~.L .}.....F
8670:  F2 E9 06 00 8B 46 F2 05  68 01 50 9A 32 2C AF 0D   .....F.. h.P.2,..
8680:  83 C4 02 89 46 F2 B8 1A  00 F7 6E 0C 8B F0 8B 46   ....F... ..n....F
8690:  F0 8B C8 D1 E0 03 C1 D1  E0 03 F0 C4 1E 68 0D 26   ........ .....h.&
86A0:  8B 80 12 04 8B C8 B8 1A  00 F7 6E 08 8B F0 C4 1E   ........ ..n.....
86B0:  64 0D 26 2B 88 18 04 89  4E EE 81 7E EE B4 00 7F   d.&+.... N..~....
86C0:  03 E9 09 00 8B 46 EE 2D  68 01 E9 16 00 81 7E EE   .....F.- h.....~.
86D0:  4C FF 7D 03 E9 06 00 8B  46 EE E9 06 00 8B 46 EE   L.}..... F.....F.
86E0:  05 68 01 50 9A 32 2C AF  0D 83 C4 02 89 46 EE 8B   .h.P.2,. .....F..
86F0:  46 EC 2B 46 F6 50 9A 32  2C AF 0D 83 C4 02 89 46   F.+F.P.2 ,......F
8700:  FE 8B 46 E2 2B 46 E8 99  52 50 52 50 9A 5E 2D AF   ..F.+F.. RPRP.^-.
8710:  0D 8B C8 8B 46 E4 2B 46  EA 8B DA 99 52 50 52 50   ....F.+F ....RPRP
8720:  8B F1 8B FB 9A 5E 2D AF  0D 03 F0 13 FA 57 56 9A   .....^-. .....WV.
8730:  22 01 B1 09 83 C4 04 89  46 E6 8B 46 E6 03 46 EE   "....... F..F..F.
8740:  03 46 F2 89 46 FC B8 1A  00 F7 6E 0C 8B F0 C4 1E   .F..F... ..n.....
8750:  68 0D 26 F6 80 24 04 01  75 03 E9 26 00 B8 1A 00   h.&..$.. u..&....
8760:  F7 6E 08 8B F0 C4 1E 64  0D 26 F6 80 24 04 01 75   .n.....d .&..$..u
8770:  03 E9 0F 00 83 7E FC 46  7F 03 E9 06 00 B8 00 00   .....~.F ........
8780:  E9 43 00 B8 1A 00 F7 6E  0C 8B F0 C4 1E 68 0D 26   .C.....n .....h.&
```

```
8790: F6 80 24 04 01 75 03 E9  17 00 B8 1A 00 F7 6E 08   ..$..u.. ......n.
87A0: 8B F0 C4 1E 64 0D 26 F6  80 24 04 01 74 03 E9 0F   ....d.&. .$..t...
87B0: 00 83 7E FC 5A 7F 03 E9  06 00 B8 00 00 E9 06 00   ..~.Z... ........
87C0: B8 01 00 E9 00 00 5E 5F  8B E5 5D CB 55 8B EC 81   ......^_ ..].U...
87D0: EC 02 00 57 56 8E 06 28  0B 26 83 3E EA 00 00 75   ...WV..( .&.>...u
87E0: 03 E9 32 00 FF 76 1C FF  76 1A FF 76 18 FF 76 16   ..2..v.. v..v..v.
87F0: FF 76 14 FF 76 12 FF 76  10 FF 76 0E FF 76 0C FF   .v..v..v ..v..v..
8800: 76 0A FF 76 08 FF 76 06  9A 53 28 25 00 83 C4 18   v..v..v. .S(%....
8810: 89 46 FE E9 2F 00 FF 76  1C FF 76 1A FF 76 18 FF   .F../..v ..v..v..
8820: 76 16 FF 76 14 FF 76 12  FF 76 10 FF 76 0E FF 76   v..v..v. .v..v..v
8830: 0C FF 76 0A FF 76 08 FF  76 06 9A 01 0A AA 08 83   ..v..v.. v.......
8840: C4 18 89 46 FE 8B 46 FE  E9 00 00 5E 5F 8B E5 5D   ...F..F. ...^_..]
8850: CB 55 8B EC 81 EC 00 00  57 56 C4 5E 0E 26 83 3F   .U...... WV.^.&.?
8860: FF 74 03 E9 06 00 B8 FF  FF E9 79 00 8E 06 28 0B   .t...... ..y...(.
8870: 26 83 3E EA 00 00 75 03  E9 20 00 FF 76 12 FF 76   &.>...u. . ..v..v
8880: 10 FF 76 0E FF 76 0C FF  76 0A FF 76 08 FF 76 06   ..v..v.. v..v..v.
8890: 9A 1E 25 25 00 83 C4 0E  E9 4A 00 C4 5E 0E 26 FF   ..%%.... .J..^.&.
88A0: 37 FF 76 08 FF 76 06 9A  0C 00 AA 08 83 C4 06 C4   7.v..v.. ........
88B0: 5E 0E 26 89 07 C4 5E 0E  26 83 3F FF 74 03 E9 06   ^.&...^. &.?.t...
88C0: 00 B8 FF FF E9 1E 00 B8  1A 00 C4 5E 0E 26 F7 2F   ........ ...^.&./
88D0: 8B F0 C4 5E 06 26 8B 40  0A C4 5E 0A 26 89 07 B8   ...^.&.@ ..^.&...
88E0: 00 00 E9 00 00 5E 5F 8B  E5 5D CB 55 8B EC 81 EC   .....^_. .].U....
88F0: 04 00 57 56 B8 1A 00 F7  6E 06 8B 76 0A 8B CE D1   ..WV.... n..v....
8900: E6 03 F1 D1 E6 03 F0 C4  1E 68 0D 26 8B 80 14 04   ........ .h.&....
8910: 2B 46 0C 50 9A 32 2C AF  0D 83 C4 02 8B C8 B8 14   +F.P.2,. ........
8920: 00 F7 6E 0C BB 64 00 99  F7 FB 3B C1 7C 03 E9 06   ..n..d.. ..;.|...
8930: 00 B8 00 00 E9 5A 00 B9  1A 00 8B 46 06 2B 46 08   .....Z.. ...F.+F.
8940: F7 E9 D1 F8 99 52 50 52  50 9A 5E 2D AF 0D D1 E0   .....RPR P.^-....
8950: D1 D2 52 50 9A 22 01 B1  09 83 C4 04 89 46 FE 8B   ..RP.".. .....F..
8960: 46 FE 2B 46 0E 50 9A 32  2C AF 0D 83 C4 02 89 46   F.+F.P.2 ,......F
8970: FC B8 14 00 F7 6E 0E B9  64 00 99 F7 F9 3B 46 FC   .....n.. d....;F.
8980: 7C 03 E9 06 00 B8 00 00  E9 06 00 B8 01 00 E9 00   |....... ........
8990: 00 5E 5F 8B E5 5D CB 55  8B EC 81 EC 14 00 57 56   .^_..].U ......WV
89A0: C7 46 FE 32 00 8E 06 32  0B 26 83 3E FA 00 00 74   .F.2...2 .&.>...t
89B0: 03 E9 DF 00 FF 76 06 9A  97 00 B1 09 83 C4 02 99   .....v.. ........
89C0: 89 46 F8 89 56 FA 8B 46  FA 0B 46 F8 74 03 E9 0A   .F..V..F ..F.t...
89D0: 00 C7 46 F8 64 00 C7 46  FA 00 00 8B 46 08 99 89   ..F.d..F ....F...
89E0: 46 EC 89 56 EE B8 10 27  BA 00 00 52 50 8D 4E EC   F..V...' ...RP.N.
89F0: 51 9A BC 2D AF 0D 8B 46  F8 8B 56 FA 89 46 F0 89   Q..-...F ..V..F..
8A00: 56 F2 FF 76 F2 FF 76 F0  FF 76 EE FF 76 EC 9A C4   V..v..v. .v..v...
8A10: 2C AF 0D 89 46 F4 89 56  F6 8B 46 F4 3B 46 FE 7F   ,...F..V ..F.;F..
8A20: 03 E9 03 00 8B 46 FE 89  46 FC 8B 46 FE F7 D8 3B   .....F.. F..F...;
8A30: 46 FC 7C 03 E9 03 00 8B  46 FC 89 46 FC 8B 46 FC   F.|..... F..F..F.
8A40: C4 5E 0E 26 29 07 8B 46  08 C4 5E 0A 26 01 07 8B   .^.&)..F ..^.&...
8A50: 46 FC 99 89 46 EC 89 56  EE FF 76 06 9A 0C 00 B1   F...F..V ..v.....
8A60: 09 83 C4 02 99 52 50 8D  46 EC 50 9A BC 2D AF 0D   .....RP. F.P..-..
8A70: B8 10 27 BA 00 00 52 50  FF 76 EE FF 76 EC 9A C4   ..'...RP .v..v...
8A80: 2C AF 0D 89 46 F4 89 56  F6 8B 46 F4 C4 5E 0A 26   ,...F..V ..F..^.&
8A90: 29 47 02 5E 5F 8B E5 5D  CB 00 55 8B EC 81 EC 02   )G.^_..] ..U.....
8AA0: 00 57 56 C7 46 FE 00 00  E9 03 00 FF 46 FE 83 7E   .WV.F... ....F..~
8AB0: FE 03 7C 03 E9 CF 00 C4  5E 06 26 8B 47 08 C4 5E   ..|..... ^.&.G..^
8AC0: 06 26 3B 47 0E 7C 03 E9  04 00 26 8B 47 0E C4 5E   .&;G.|.. ..&.G..^
8AD0: 06 26 3B 47 02 7C 03 E9  04 00 26 8B 47 02 8B 76   .&;G.|.. ..&.G..v
```

```
8AE0:  FE 8B CE D1 E6 03 F1 D1  E6 C4 5E 06 26 3B 40 02   ........ ..^.&;@.
8AF0:  74 03 E9 1B 00 8B 76 FE  8B C6 D1 E6 03 F0 D1 E6   t.....v. ........
8B00:  C4 5E 06 26 8B 40 02 C4  5E 0A 26 89 07 E9 73 00   .^.&.@.. ^.&...s.
8B10:  C4 5E 06 26 8B 47 08 C4  5E 06 26 3B 47 0E 7F 03   .^.&.G.. ^.&;G...
8B20:  E9 04 00 26 8B 47 0E C4  5E 06 26 3B 47 02 7F 03   ...&.G.. ^.&;G...
8B30:  E9 04 00 26 8B 47 02 8B  76 FE 8B CE D1 E6 03 F1   ...&.G.. v.......
8B40:  D1 E6 C4 5E 06 26 3B 40  02 74 03 E9 1C 00 8B 76   ...^.&;@ .t.....v
8B50:  FE 8B C6 D1 E6 03 F0 D1  E6 C4 5E 06 26 8B 40 02   ........ ..^.&.@.
8B60:  C4 5E 0A 26 89 47 04 E9  19 00 8B 76 FE 8B C6 D1   .^.&.G.. ...v....
8B70:  E6 03 F0 D1 E6 C4 5E 06  26 8B 40 02 C4 5E 0A 26   ......^. &.@..^.&
8B80:  89 47 02 E9 25 FF 5E 5F  8B E5 5D CB 55 8B EC 81   .G..%.^_ ..].U...
8B90:  EC 04 00 57 56 C7 46 FE  00 00 C7 46 FC 00 00 E9   ...WV.F. ...F....
8BA0:  03 00 FF 46 FC 83 7E FC  03 7C 03 E9 5E 00 8B 5E   ...F..~. .|..^..^
8BB0:  FC D1 E3 C4 76 0A 26 8B  00 8B 5E FC D1 E3 C4 76   ....v.&. ..^....v
8BC0:  06 26 2B 00 F7 D8 50 9A  32 2C AF 0D 83 C4 02 3D   .&+...P. 2,.....=
8BD0:  24 00 7F 03 E9 06 00 B8  00 00 E9 44 00 8B 5E FC   $....... ...D..^.
8BE0:  D1 E3 C4 76 0A 26 8B 00  8B 5E FC D1 E3 C4 76 06   ...v.&.. .^....v.
8BF0:  26 2B 00 F7 D8 50 9A 32  2C AF 0D 83 C4 02 3D 12   &+...P.2 ,.....=.
8C00:  00 7F 03 E9 03 00 FF 46  FE E9 96 FF 83 7E FE 01   .......F .....~..
8C10:  7F 03 E9 06 00 B8 00 00  E9 06 00 B8 01 00 E9 00   ........ ........
8C20:  00 5E 5F 8B E5 5D CB 55  8B EC 81 EC 06 00 57 56   .^_..].U ......WV
8C30:  C7 46 FA 00 00 8B 46 0C  89 46 FC 8B 46 FA 39 46   .F....F. .F..F.9F
8C40:  FC 7E 03 E9 06 00 8B 46  FA E9 5A 00 8B 46 FC 03   .~.....F ..Z..F..
8C50:  46 FA D1 F8 89 46 FE 8B  5E FE 8B C3 D1 E3 03 D8   F....F.. ^.......
8C60:  D1 E3 C4 76 06 8B 46 0A  26 39 00 7C 03 E9 0A 00   ...v..F. &9.|....
8C70:  8B 46 FE 40 89 46 FA E9  C1 FF 8B 5E FE 8B C3 D1   .F.@.F.. ...^....
8C80:  E3 03 D8 D1 E3 C4 76 06  8B 46 0A 26 39 00 7F 03   ......v. .F.&9...
8C90:  E9 0A 00 8B 46 FE 48 89  46 FC E9 9E FF 8B 46 FE   ....F.H. F.....F.
8CA0:  E9 03 00 E9 95 FF 5E 5F  8B E5 5D CB 55 8B EC 81   ......^_ ..].U...
8CB0:  EC 02 00 57 56 B8 1A 00  F7 6E 0A 8B F0 C4 5E 06   ...WV... .n....^.
8CC0:  26 83 78 04 FF 75 03 E9  37 00 B8 1A 00 F7 6E 0A   &.x..u.. 7.....n.
8CD0:  8B F0 C4 5E 06 26 8B 40  0A 8B C8 B8 1A 00 F7 6E   ...^.&.@ .......n
8CE0:  0A 8B F0 C4 5E 06 26 39  48 04 75 03 E9 12 00 B8   ....^.&9 H.u.....
8CF0:  1A 00 F7 6E 0A 8B F0 C4  5E 06 26 8B 40 04 E9 FF   ...n.... ^.&.@...
8D00:  00 B8 1A 00 F7 6E 0A 8B  F0 C4 5E 06 26 83 78 10   .....n.. ..^.&.x.
8D10:  FF 75 03 E9 37 00 B8 1A  00 F7 6E 0A 8B F0 C4 5E   .u..7... ..n....^
8D20:  06 26 8B 40 10 8B C8 B8  1A 00 F7 6E 0A 8B F0 C4   .&.@.... ...n....
8D30:  5E 06 26 39 48 0A 75 03  E9 12 00 B8 1A 00 F7 6E   ^.&9H.u. .......n
8D40:  0A 8B F0 C4 5E 06 26 8B  40 10 E9 B3 00 B8 1A 00   ....^.&. @.......
8D50:  F7 6E 0A 8B F0 C4 5E 06  26 8B 40 0A 89 46 FE B8   .n....^. &.@..F..
8D60:  1A 00 F7 6E FE 8B F0 C4  5E 06 8B 46 0A 26 39 40   ...n.... ^..F.&9@
8D70:  04 74 03 E9 63 00 B8 1A  00 F7 6E FE 8B F0 C4 5E   .t..c... ..n....^
8D80:  06 8B 46 0A 26 39 40 10  75 03 E9 4C 00 B8 1A 00   ..F.&9@. u..L....
8D90:  F7 6E FE 8B F0 C4 5E 06  26 83 78 10 FF 75 03 E9   .n....^. &.x..u..
8DA0:  37 00 B8 1A 00 F7 6E FE  8B F0 C4 5E 06 26 8B 40   7.....n. ...^.&.@
8DB0:  10 8B C8 B8 1A 00 F7 6E  FE 8B F0 C4 5E 06 26 39   .......n ....^.&9
8DC0:  48 0A 75 03 E9 12 00 B8  1A 00 F7 6E FE 8B F0 C4   H.u..... ...n....
8DD0:  5E 06 26 8B 40 10 E9 27  00 8B 46 FE 89 46 0A B8   ^.&.@..' ..F..F..
8DE0:  1A 00 F7 6E 0A 8B F0 C4  5E 06 26 8B 40 0A 89 46   ...n.... ^.&.@..F
8DF0:  FE 40 74 03 E9 06 00 B8  FF FF E9 03 00 E9 5F FF   .@t..... ......_.
8E00:  5E 5F 8B E5 5D CB 55 8B  EC 81 EC 00 00 57 56 8B   ^_..].U. .....WV.
8E10:  46 0A 2B 46 06 50 8B 46  0C 2B 46 08 50 9A 99 01   F.+F.P.F .+F.P...
8E20:  B1 09 83 C4 04 E9 00 00  5E 5F 8B E5 5D CB 55 8B   ........ ^_..].U.
```

```
8E30:  EC 81 EC 02 00 57 56 FF  76 14 FF 76 12 FF 76 10   .....WV. v..v..v.
8E40:  FF 76 0E 9A 66 01 AA 08  83 C4 08 FF 76 0C FF 76   .v..f... ....v..v
8E50:  0A FF 76 08 FF 76 06 8B  F0 9A 66 01 AA 08 83 C4   ..v..v.. ..f.....
8E60:  08 2B C6 89 46 FE 81 7E  FE B4 00 7F 03 E9 09 00   .+..F..~ ........
8E70:  8B 46 FE 2D 68 01 E9 16  00 81 7E FE 4C FF 7D 03   .F.-h... ..~.L.}.
8E80:  E9 06 00 8B 46 FE E9 06  00 8B 46 FE 05 68 01 E9   ....F... ..F..h..
8E90:  00 00 5E 5F 8B E5 5D CB  55 8B EC 81 EC 08 00 57   ..^_..]. U......W
8EA0:  56 FF 36 6E 0D FF 36 6C  0D C4 5E 06 26 8B 07 99   V.6n..6l ..^.&...
8EB0:  52 50 9A 5E 2D AF 0D FF  36 7A 0D FF 36 78 0D C4   RP.^-... 6z..6x..
8EC0:  5E 0A 8B C8 26 8B 07 8B  DA 99 52 50 8B F1 8B FB   ^...&... ..RP....
8ED0:  9A 5E 2D AF 0D 03 F0 13  FA 03 36 84 0D 13 3E 86   .^-..... ..6...>.
8EE0:  0D 81 C6 88 13 83 D7 00  89 76 FC 89 7E FE FF 36   ........ .v..~..6
8EF0:  72 0D FF 36 70 0D C4 5E  06 26 8B 07 99 52 50 9A   r..6p..^ .&...RP.
8F00:  5E 2D AF 0D FF 36 7E 0D  FF 36 7C 0D C4 5E 0A 8B   ^-...6~. .6|..^..
8F10:  C8 26 8B 07 8B DA 99 52  50 8B F1 8B FB 9A 5E 2D   .&.....R P.....^-
8F20:  AF 0D 03 F0 13 FA 03 36  88 0D 13 3E 8A 0D 81 C6   .......6 ...>....
8F30:  88 13 83 D7 00 89 76 F8  89 7E FA B8 10 27 BA 00   ......v. .~...'..
8F40:  00 52 50 FF 76 FE FF 76  FC 9A C4 2C AF 0D C4 5E   .RP.v..v ...,...^
8F50:  06 26 89 07 B8 10 27 BA  00 00 52 50 FF 76 FA FF   .&....'. ..RP.v..
8F60:  76 F8 9A C4 2C AF 0D C4  5E 0A 26 89 07 5E 5F 8B   v...,... ^.&..^_.
8F70:  E5 5D CB 55 8B EC 81 EC  06 00 57 56 FF 76 14 FF   .].U.... ..WV.v..
8F80:  76 12 FF 76 10 FF 76 0E  FF 76 0C FF 76 0A FF 76   v..v..v. .v..v..v
8F90:  08 FF 76 06 9A 8E 01 AA  08 83 C4 10 89 46 FA 83   ..v..... .....F..
8FA0:  7E FA 00 7C 03 E9 27 00  8B 46 FA F7 D8 50 9A 97   ~..|..'. .F...P..
8FB0:  00 B1 09 83 C4 02 89 46  FE 8B 46 FA F7 D8 50 9A   .......F ..F...P.
8FC0:  0C 00 B1 09 83 C4 02 F7  D8 89 46 FC E9 1C 00 FF   ........ ..F.....
8FD0:  76 FA 9A 97 00 B1 09 83  C4 02 89 46 FE FF 76 FA   v....... ...F..v.
8FE0:  9A 0C 00 B1 09 83 C4 02  89 46 FC 8B 46 FE 99 A3   ........ .F..F...
8FF0:  6C 0D 89 16 6E 0D 8B 46  FC F7 D8 99 A3 78 0D 89   l...n..F .....x..
9000:  16 7A 0D 8B 46 08 F7 D8  F7 6E FC 8B C8 8B 46 06   .z..F... .n....F.
9010:  F7 D8 8B DA F7 6E FE 2B  C1 1B D3 8B C8 B8 10 27   .....n.+ .......'
9020:  8B DA F7 6E 0E 03 C1 13  D3 A3 84 0D 89 16 86 0D   ...n.... ........
9030:  8B 46 FC 99 A3 70 0D 89  16 72 0D 8B 46 FE 99 A3   .F...p.. .r..F...
9040:  7C 0D 89 16 7E 0D 8B 46  08 F7 D8 F7 6E FE 8B C8   |...~..F ....n...
9050:  8B 46 06 F7 D8 8B DA F7  6E FC 03 C8 13 DA B8 10   .F...... n.......
9060:  27 F7 6E 10 03 C8 13 DA  89 0E 88 0D 89 1E 8A 0D   '.n..... ........
9070:  2B C0 A3 76 0D A3 74 0D  2B C0 A3 82 0D A3 80 0D   +..v..t. +.......
9080:  C7 06 8C 0D 01 00 C7 06  8E 0D 00 00 5E 5F 8B E5   ........ ....^_..
9090:  5D CB 55 8B EC 81 EC 0C  00 57 56 83 7E 0A FF 75   ].U..... .WV.~..u
90A0:  03 E9 07 02 B8 1A 00 F7  6E 0A 03 46 06 8B 56 08   ........ n..F..V.
90B0:  05 04 00 1E 8D 7E F8 8B  F0 16 07 8E DA A5 A5 A5   .....~.. ........
90C0:  1F B8 1A 00 F7 6E 0A 8B  F0 C4 5E 06 26 83 78 0A   .....n.. ..^.&.x.
90D0:  FF 74 03 E9 08 00 C7 46  F4 02 00 E9 30 00 B8 1A   .t.....F ....0...
90E0:  00 F7 6E 0A 8B F0 C4 5E  06 B8 1A 00 26 F7 68 0A   ..n....^ ....&.h.
90F0:  8B F0 C4 5E 06 8B 46 0A  26 39 40 04 74 03 E9 08   ...^..F. &9@.t...
9100:  00 C7 46 F4 02 00 E9 05  00 C7 46 F4 16 00 8B 46   ..F..... ..F....F
9110:  0C E9 6F 01 B8 1A 00 F7  6E 0A 03 46 06 8B 56 08   ..o..... n..F..V.
9120:  05 10 00 8B C8 B8 1A 00  8B DA F7 6E 0A 8B F0 8B   ........ ...n....
9130:  C3 C4 5E 06 1E 8D 78 04  8B F1 8E D8 A5 A5 A5 1F   ..^...x. ........
9140:  B8 1A 00 F7 6E 0A 03 46  06 8B 56 08 05 0A 00 8B   ....n..F ..V.....
9150:  C8 B8 1A 00 8B DA F7 6E  0A 8B F0 8B C3 C4 5E 06   .......n ......^.
9160:  1E 8D 78 10 8B F1 8E D8  A5 A5 A5 1F B8 1A 00 F7   ..x..... ........
9170:  6E 0A 8B F0 C4 5E 06 8D  78 0A 8D 76 F8 A5 A5 A5   n....^.. x..v....
```

```
9180:  FF 76 F4 B8 1A 00 F7 6E  0A 8B F0 C4 5E 06 26 FF   .v.....n ....^.&.
9190:  70 10 FF 76 08 FF 76 06  9A 17 06 AA 08 83 C4 08   p..v..v. ........
91A0:  89 46 F6 B8 0A 00 50 B8  1A 00 F7 6E 0A 8B F0 C4   .F....P. ...n....
91B0:  5E 06 26 FF 70 0A FF 76  08 FF 76 06 9A 17 06 AA   ^.&.p..v ..v.....
91C0:  08 83 C4 08 89 46 FE E9  C9 00 B8 1A 00 F7 6E 0A   .....F.. ......n.
91D0:  03 46 06 8B 56 08 05 0A  00 8B C8 B8 1A 00 8B DA   .F..V... ........
91E0:  F7 6E 0A 8B F0 8B C3 C4  5E 06 1E 8D 78 04 8B F1   .n...... ^...x...
91F0:  8E D8 A5 A5 A5 1F B8 1A  00 F7 6E 0A 03 46 06 8B   ........ ..n..F..
9200:  56 08 05 10 00 8B C8 B8  1A 00 8B DA F7 6E 0A 8B   V....... .....n..
9210:  F0 8B C3 C4 5E 06 1E 8D  78 0A 8B F1 8E D8 A5 A5   ....^... x.......
9220:  A5 1F B8 1A 00 F7 6E 0A  8B F0 C4 5E 06 8D 78 10   ......n. ...^..x.
9230:  8D 76 F8 A5 A5 A5 FF 76  F4 B8 1A 00 F7 6E 0A 8B   .v.....v .....n..
9240:  F0 C4 5E 06 26 FF 70 04  FF 76 08 FF 76 06 9A 17   ..^.&.p. .v..v...
9250:  06 AA 08 83 C4 08 89 46  F6 B8 F4 FF 50 B8 1A 00   .......F ....P...
9260:  F7 6E 0A 8B F0 C4 5E 06  26 FF 70 0A FF 76 08 FF   .n....^. &.p..v..
9270:  76 06 9A 17 06 AA 08 83  C4 08 89 46 FE E9 13 00   v....... ...F....
9280:  E9 10 00 40 75 03 E9 41  FF 48 48 75 03 E9 84 FE   ...@u..A .HHu....
9290:  E9 00 00 83 7E FE FF 75  03 E9 09 00 8B 46 FE E9   ....~..u .....F..
92A0:  0F 00 E9 06 00 8B 46 0A  E9 06 00 B8 FF FF E9 00   ......F. ........
92B0:  00 5E 5F 8B E5 5D CB 55  8B EC 81 EC 0A 00 57 56   .^_..].U ......WV
92C0:  83 7E 0A FF 75 03 E9 CC  03 8B 46 0C E9 7F 03 B8   .~..u... ..F.....
92D0:  1A 00 F7 6E 0A 03 46 06  8B 56 08 05 04 00 1E 8D   ...n..F. .V......
92E0:  7E F8 8B F0 16 07 8E DA  A5 A5 A5 1F B8 1A 00 F7   ~....... ........
92F0:  6E 0A 03 46 06 8B 56 08  05 10 00 8B C8 B8 1A 00   n..F..V. ........
9300:  8B DA F7 6E 0A 8B F0 8B  C3 C4 5E 06 1E 8D 78 04   ...n.... ..^...x.
9310:  8B F1 8E D8 A5 A5 A5 1F  B8 1A 00 F7 6E 0A 03 46   ........ ....n..F
9320:  06 8B 56 08 05 0A 00 8B  C8 B8 1A 00 8B DA F7 6E   ..V..... .......n
9330:  0A 8B F0 8B C3 C4 5E 06  1E 8D 78 10 8B F1 8E D8   ......^. ..x.....
9340:  A5 A5 A5 1F B8 1A 00 F7  6E 0A 8B F0 C4 5E 06 8D   ........ n....^..
9350:  78 0A 8D 76 F8 A5 A5 A5  B8 0A 00 50 B8 1A 00 F7   x..v.... ...P....
9360:  6E 0A 8B F0 C4 5E 06 26  FF 70 0A FF 76 08 FF 76   n....^.& .p..v..v
9370:  06 9A 17 06 AA 08 83 C4  08 89 46 FE E9 F2 02 B8   ........ ..F.....
9380:  1A 00 F7 6E 0A 03 46 06  8B 56 08 05 10 00 1E 8D   ...n..F. .V......
9390:  7E F8 8B F0 16 07 8E DA  A5 A5 A5 1F B8 1A 00 F7   ~....... ........
93A0:  6E 0A 03 46 06 8B 56 08  05 04 00 8B C8 B8 1A 00   n..F..V. ........
93B0:  8B DA F7 6E 0A 8B F0 8B  C3 C4 5E 06 1E 8D 78 10   ...n.... ..^...x.
93C0:  8B F1 8E D8 A5 A5 A5 1F  B8 1A 00 F7 6E 0A 03 46   ........ ....n..F
93D0:  06 8B 56 08 05 0A 00 8B  C8 B8 1A 00 8B DA F7 6E   ..V..... .......n
93E0:  0A 8B F0 8B C3 C4 5E 06  1E 8D 78 04 8B F1 8E D8   ......^. ..x.....
93F0:  A5 A5 A5 1F B8 1A 00 F7  6E 0A 8B F0 C4 5E 06 8D   ........ n....^..
9400:  78 0A 8D 76 F8 A5 A5 A5  B8 F4 FF 50 B8 1A 00 F7   x..v.... ...P....
9410:  6E 0A 8B F0 C4 5E 06 26  FF 70 0A FF 76 08 FF 76   n....^.& .p..v..v
9420:  06 9A 17 06 AA 08 83 C4  08 89 46 FE E9 42 02 B8   ........ ..F..B..
9430:  1A 00 F7 6E 0A 03 46 06  8B 56 08 05 10 00 1E 8D   ...n..F. .V......
9440:  7E F8 8B F0 16 07 8E DA  A5 A5 A5 1F B8 1A 00 F7   ~....... ........
9450:  6E 0A 8B F0 C4 5E 06 26  83 78 0A FF 74 03 E9 0E   n....^.& .x..t...
9460:  00 8B 46 0A 89 46 FE C7  46 F6 FF FF E9 30 00 B8   ..F..F.. F....0..
9470:  1A 00 F7 6E 0A 8B F0 C4  5E 06 B8 1A 00 26 F7 68   ...n.... ^....&.h
9480:  0A 8B F0 C4 5E 06 8B 46  0A 26 39 40 04 74 03 E9   ....^..F .&9@.t..
9490:  08 00 C7 46 F6 02 00 E9  05 00 C7 46 F6 16 00 B8   ...F.... ...F....
94A0:  1A 00 F7 6E 0A 03 46 06  8B 56 08 05 0A 00 8B C8   ...n..F. .V......
94B0:  B8 1A 00 8B DA F7 6E 0A  8B F0 8B C3 C4 5E 06 1E   ......n. .....^..
94C0:  8D 78 10 8B F1 8E D8 A5  A5 A5 1F B8 1A 00 F7 6E   .x...... .......n
```

```
94D0:  0A 03 46 06 8B 56 08 05  04 00 8B C8 B8 1A 00 8B   ..F..V.. ........
94E0:  DA F7 6E 0A 8B F0 8B C3  C4 5E 06 1E 8D 78 0A 8B   ..n..... .^...x..
94F0:  F1 8E D8 A5 A5 A5 1F B8  1A 00 F7 6E 0A 8B F0 C4   ........ ...n....
9500:  5E 06 8D 78 04 8D 76 F8  A5 A5 A5 83 7E F6 FF 74   ^..x..v. ....~..t
9510:  03 E9 03 00 E9 5A 01 FF  76 F6 B8 1A 00 F7 6E 0A   .....Z.. v.....n.
9520:  8B F0 C4 5E 06 26 FF 70  10 FF 76 08 FF 76 06 9A   ...^.&.p ..v..v..
9530:  17 06 AA 08 83 C4 08 89  46 FE E9 34 01 B8 1A 00   ........ F..4....
9540:  F7 6E 0A 03 46 06 8B 56  08 05 10 00 1E 8D 7E F8   .n..F..V ......~.
9550:  8B F0 16 07 8E DA A5 A5  A5 1F B8 1A 00 F7 6E 0A   ........ ......n.
9560:  8B F0 C4 5E 06 26 83 78  0A FF 74 03 E9 0E 00 8B   ...^.&.x ..t.....
9570:  46 0A 89 46 FE C7 46 F6  FF FF E9 30 00 B8 1A 00   F..F..F. ...0....
9580:  F7 6E 0A 8B F0 C4 5E 06  B8 1A 00 26 F7 68 0A 8B   .n....^. ...&.h..
9590:  F0 C4 5E 06 8B 46 0A 26  39 40 04 74 03 E9 08 00   ..^..F.& 9@.t....
95A0:  C7 46 F6 02 00 E9 05 00  C7 46 F6 16 00 B8 1A 00   .F...... .F......
95B0:  F7 6E 0A 03 46 06 8B 56  08 05 04 00 8B C8 B8 1A   .n..F..V ........
95C0:  00 8B DA F7 6E 0A 8B F0  8B C3 C4 5E 06 1E 8D 78   ....n... ...^...x
95D0:  10 8B F1 8E D8 A5 A5 A5  1F B8 1A 00 F7 6E 0A 03   ........ .....n..
95E0:  46 06 8B 56 08 05 0A 00  8B C8 B8 1A 00 8B DA F7   F..V.... ........
95F0:  6E 0A 8B F0 8B C3 C4 5E  06 1E 8D 78 04 8B F1 8E   n......^ ...x....
9600:  D8 A5 A5 A5 1F B8 1A 00  F7 6E 0A 8B F0 C4 5E 06   ........ .n....^.
9610:  8D 78 0A 8D 76 F8 A5 A5  A5 83 7E F6 FF 74 03 E9   .x..v... ..~..t..
9620:  03 00 E9 4C 00 FF 76 F6  B8 1A 00 F7 6E 0A 8B F0   ...L..v. ....n...
9630:  C4 5E 06 26 FF 70 04 FF  76 08 FF 76 06 9A 17 06   .^.&.p.. v..v....
9640:  AA 08 83 C4 08 89 46 FE  E9 26 00 E9 23 00 2D F4   ......F. .&..#.-.
9650:  FF 75 03 E9 29 FD 2D 0E  00 75 03 E9 D1 FD 2D 08   .u..).-. .u....-.
9660:  00 75 03 E9 69 FC 2D 0C  00 75 03 E9 CF FE E9 00   .u..i.-. .u......
9670:  00 B8 1A 00 F7 6E 0A 8B  F0 C4 5E 06 26 83 78 0A   .....n.. ..^.&.x.
9680:  FF 74 03 E9 09 00 8B 46  0A E9 0F 00 E9 06 00 8B   .t.....F ........
9690:  46 FE E9 06 00 B8 FF FF  E9 00 00 5E 5F 8B E5 5D   F....... ...^_..]
96A0:  CB 55 8B EC 81 EC 04 00  57 56 C7 46 FE FF FF B8   .U...... WV.F....
96B0:  1A 00 F7 6E 1C 8B F0 C4  5E 12 8B 46 1A 26 39 40   ...n.... ^..F.&9@
96C0:  0A 74 03 E9 7B 00 B8 1A  00 F7 6E 0E 8B F0 C4 5E   .t..{... ..n....^
96D0:  06 8B 46 10 26 39 40 04  74 03 E9 32 00 B8 1A 00   ..F.&9@. t..2....
96E0:  F7 6E 1A 8B F0 C4 5E 12  8B 46 1C 26 39 40 10 74   .n....^. .F.&9@.t
96F0:  03 E9 18 00 B8 01 00 50  FF 76 1A FF 76 14 FF 76   .......P .v..v..v
9700:  12 9A F2 03 AA 08 83 C4  08 89 46 FE E9 2F 00 B8   ........ ..F../..
9710:  1A 00 F7 6E 1A 8B F0 C4  5E 12 8B 46 1C 26 39 40   ...n.... ^..F.&9@
9720:  04 74 03 E9 18 00 B8 FF  FF 50 FF 76 1A FF 76 14   .t...... .P.v..v.
9730:  FF 76 12 9A F2 03 AA 08  83 C4 08 89 46 FE E9 4A   .v...... ....F..J
9740:  00 B8 1A 00 F7 6E 0E 8B  F0 C4 5E 06 8B 46 10 26   .....n.. ..^..F.&
9750:  39 40 10 74 03 E9 1B 00  B8 01 00 50 FF 76 1A FF   9@.t.... ...P.v..
9760:  76 14 FF 76 12 9A F2 03  AA 08 83 C4 08 89 46 FE   v..v.... ......F.
9770:  E9 18 00 B8 FF FF 50 FF  76 1A FF 76 14 FF 76 12   ......P. v..v..v.
9780:  9A F2 03 AA 08 83 C4 08  89 46 FE 83 7E FE FF 75   ........ .F..~..u
9790:  03 E9 20 00 B8 1A 00 F7  6E 1A 8B F0 C4 5E 12 26   .. ..... n....^.&
97A0:  8B 40 16 89 46 FC 8B 5E  FC D1 E3 C4 76 16 8B 46   .@..F..^ ....v..F
97B0:  FE 26 89 00 8B 46 FE E9  00 00 5E 5F 8B E5 5D CB   .&...F.. ..^_..].
97C0:  55 8B EC 81 EC 00 00 57  56 FF 76 06 9A 3A 0B AA   U......W V.v..:..
97D0:  08 83 C4 02 5E 5F 8B E5  5D CB 55 8B EC 81 EC 14   ....^_.. ].U.....
97E0:  00 57 56 83 7E 06 00 74  03 E9 20 00 C7 46 EC 64   .WV.~..t .. ..F.d
97F0:  9C C7 46 EE 62 23 8E 06  34 0B 26 A1 02 00 89 46   ..F.b#.. 4.&....F
9800:  FA C7 46 FC 0C 04 8C 46  FE E9 1D 00 C7 46 EC D2   ..F....F .....F..
9810:  A4 C7 46 EE AA 14 8E 06  36 0B 26 A1 70 08 89 46   ..F..... 6.&.p..F
```

```
9820:  FA C7 46 FC 7A 0C 8C 46  FE B8 04 00 50 B8 00 00   ..F.z..F ....P...
9830:  50 FF 76 EE FF 76 EC 9A  86 2B AF 0D 83 C4 08 C7   P.v..v.. .+......
9840:  46 F6 00 00 B8 00 00 89  46 F0 89 46 F8 E9 03 00   F....... F..F....
9850:  FF 46 F0 8B 46 FA 39 46  F8 7C 03 E9 49 01 83 7E   .F..F.9F .|..I..
9860:  F8 FF 75 03 E9 3D 01 C7  46 F2 00 00 8B 5E F2 8B   ..u..=.. F....^..
9870:  C3 D1 E3 03 D8 D1 E3 C4  76 EC 26 8B 00 8B C8 B8   ........ v.&.....
9880:  1A 00 F7 6E F8 8B D8 C4  76 FC 26 39 08 7F 03 E9   ...n.... v.&9....
9890:  11 00 8B 46 F6 39 46 F2  7C 03 E9 06 00 FF 46 F2   ...F.9F. |.....F.
98A0:  E9 C9 FF 8B 5E F2 8B C3  D1 E3 03 D8 D1 E3 C4 76   ....^... .......v
98B0:  EC 26 8B 00 8B C8 B8 1A  00 F7 6E F8 8B D8 C4 76   .&...... ..n....v
98C0:  FC 26 39 08 74 03 E9 39  00 8B 76 F2 8B C6 D1 E6   .&9.t..9 ..v.....
98D0:  03 F0 D1 E6 C4 5E EC 26  8B 40 02 8B C8 B8 1A 00   .....^.& .@......
98E0:  F7 6E F8 8B F0 C4 5E FC  26 39 48 02 7F 03 E9 11   .n....^. &9H.....
98F0:  00 8B 46 F6 39 46 F2 7C  03 E9 06 00 FF 46 F2 E9   ..F.9F.| .....F..
9900:  A1 FF 8B 46 F6 89 46 F4  E9 03 00 FF 4E F4 8B 46   ...F..F. ....N..F
9910:  F2 39 46 F4 7F 03 E9 30  00 8B 5E F4 8B C3 D1 E3   .9F....0 ..^.....
9920:  03 D8 D1 E3 C4 76 EC 8B  46 F4 8B C8 D1 E0 03 C1   .....v.. F.......
9930:  D1 E0 03 46 EC 8B 56 EE  2D 06 00 1E 8D 38 8B F0   ...F..V. -....8..
9940:  8E DA A5 A5 A5 1F E9 C2  FF FF 46 F6 B8 1A 00 F7   ........ ..F.....
9950:  6E F8 8B D8 C4 76 FC 26  8B 00 8B 5E F2 8B CB D1   n....v.& ...^....
9960:  E3 03 D9 D1 E3 C4 76 EC  26 89 00 B8 1A 00 F7 6E   ......v. &......n
9970:  F8 8B F0 C4 5E FC 26 8B  40 02 8B 76 F2 8B CE D1   ....^.&. @..v....
9980:  E6 03 F1 D1 E6 C4 5E EC  26 89 40 02 8B 46 F8 8B   ......^. &.@..F..
9990:  76 F2 8B CE D1 E6 03 F1  D1 E6 C4 5E EC 26 89 40   v....... ...^.&.@
99A0:  04 FF 46 F8 E9 A9 FE 5E  5F 8B E5 5D CB 55 8B EC   ..F....^ _..].U..
99B0:  81 EC 14 00 57 56 B8 D0  07 50 B8 00 00 50 B9 98   ....WV.. .P...P..
99C0:  C9 BA 62 23 52 51 9A 86  2B AF 0D 83 C4 08 83 7E   ..b#RQ.. +.......
99D0:  06 00 74 03 E9 1E 00 8E  06 34 0B 26 A1 02 00 89   ..t..... .4.&....
99E0:  46 FA C7 46 EC 64 9C 8C  46 EE C7 46 FC 0C 04 8C   F..F.d.. F..F....
99F0:  46 FE E9 1B 00 8E 06 36  0B 26 A1 70 08 89 46 FA   F......6 .&.p..F.
9A00:  C7 46 EC D2 A4 8C 46 EE  C7 46 FC 7A 0C 8C 46 FE   .F....F. .F.z..F.
9A10:  C7 46 F4 00 00 C7 46 F0  00 00 E9 03 00 FF 46 F0   .F....F. ......F.
9A20:  8B 46 F0 39 46 FA 7F 03  E9 6B 00 B8 1A 00 F7 6E   .F.9F... .k.....n
9A30:  F4 8B D8 C4 76 FC 26 83  38 FF 74 03 E9 06 00 FF   ....v.&. 8.t.....
9A40:  46 F4 E9 E6 FF B8 1A 00  F7 6E F4 8B F0 C4 5E FC   F....... .n....^.
9A50:  26 81 78 02 E8 03 7C 03  E9 15 00 B8 1A 00 F7 6E   &.x...|. .......n
9A60:  F4 8B D8 C4 76 FC 26 81  38 E8 03 7D 03 E9 06 00   ....v.&. 8..}....
9A70:  B8 FF FF E9 90 02 B8 1A  00 F7 6E F4 8B F0 C4 5E   ........ ..n....^
9A80:  FC 26 8B 58 02 D1 E3 8E  06 38 0B 26 FF 87 98 C9   .&.X.... .8.&....
9A90:  FF 46 F4 E9 87 FF C7 46  F8 00 00 C7 46 F4 00 00   .F.....F ....F...
9AA0:  8B 46 F8 39 46 FA 7F 03  E9 47 00 8E 06 38 0B 8B   .F.9F... .G...8..
9AB0:  5E F4 D1 E3 26 83 BF 98  C9 00 74 03 E9 06 00 FF   ^...&... ..t.....
9AC0:  46 F4 E9 E6 FF 8E 06 38  0B 8B 5E F4 D1 E3 26 8B   F......8 ..^...&.
9AD0:  87 98 C9 03 46 F8 89 46  F6 8B 46 F8 8B 5E F4 D1   ....F..F ..F..^..
9AE0:  E3 26 89 87 98 C9 FF 46  F4 8B 46 F6 89 46 F8 E9   .&.....F ..F..F..
9AF0:  AE FF C7 46 F4 00 00 C7  46 F0 00 00 E9 03 00 FF   ...F.... F.......
9B00:  46 F0 8B 46 F0 39 46 FA  7F 03 E9 68 00 B8 1A 00   F..F.9F. ...h....
9B10:  F7 6E F4 8B D8 C4 76 FC  26 83 38 FF 74 03 E9 06   .n....v. &.8.t...
9B20:  00 FF 46 F4 E9 E6 FF B8  1A 00 F7 6E F4 8B F0 C4   ..F..... ...n....
9B30:  5E FC 26 8B 58 02 D1 E3  8E 06 38 0B 26 8B 87 98   ^.&.X... ..8.&...
9B40:  C9 89 46 F2 B8 1A 00 F7  6E F4 8B F0 C4 5E FC 26   ..F..... n....^.&
9B50:  8B 58 02 D1 E3 8E 06 38  0B 26 FF 87 98 C9 8B 46   .X.....8 .&.....F
9B60:  F4 8E 06 3A 0B 8B 5E F2  D1 E3 26 89 87 42 00 FF   ...:..^. ..&..B..
```

B_ENROLL.DMP Tuesday, July 13, 1993 1:12 pm Page 48

```
9B70:  46 F4 E9 8A FF B8 D0 07  50 B8 00 00 50 B9 98 C9   F....... P...P...
9B80:  BA 62 23 52 51 9A 86 2B  AF 0D 83 C4 08 C7 46 F0   .b#RQ..+ ......F.
9B90:  00 00 E9 03 00 FF 46 F0  8B 46 F0 39 46 FA 7F 03   ......F. .F.9F...
9BA0:  E9 27 00 B8 1A 00 8E 06  3A 0B 8B 5E F0 D1 E3 26   .'...... :..^...&
9BB0:  F7 AF 42 00 8B D8 C4 76  FC 26 8B 18 D1 E3 8E 06   ..B....v .&......
9BC0:  38 0B 26 FF 87 98 C9 E9  CB FF C7 46 F8 00 00 C7   8.&..... ...F....
9BD0:  46 F4 00 00 8B 46 F8 39  46 FA 7F 03 E9 47 00 8E   F....F.9 F....G..
9BE0:  06 38 0B 8B 5E F4 D1 E3  26 83 BF 98 C9 00 74 03   .8..^... &.....t.
9BF0:  E9 06 00 FF 46 F4 E9 E6  FF 8E 06 38 0B 8B 5E F4   ....F... ...8..^.
9C00:  D1 E3 26 8B 87 98 C9 03  46 F8 89 46 F6 8B 46 F8   ..&..... F..F..F.
9C10:  8B 5E F4 D1 E3 26 89 87  98 C9 FF 46 F4 8B 46 F6   .^...&.. ...F..F.
9C20:  89 46 F8 E9 AE FF C7 46  F0 00 00 E9 03 00 FF 46   .F.....F .......F
9C30:  F0 8B 46 F0 39 46 FA 7F  03 E9 C4 00 B8 1A 00 8E   ..F.9F.. ........
9C40:  06 3A 0B 8B 5E F0 D1 E3  26 F7 AF 42 00 8B D8 C4   .:..^... &..B....
9C50:  76 FC 26 8B 18 D1 E3 8E  06 38 0B 26 8B 87 98 C9   v.&..... .8.&....
9C60:  89 46 F2 B8 1A 00 8E 06  3A 0B 8B 5E F0 D1 E3 26   .F...... :..^...&
9C70:  F7 AF 42 00 8B D8 C4 76  FC 26 8B 18 D1 E3 8E 06   ..B....v .&......
9C80:  38 0B 26 FF 87 98 C9 B8  1A 00 8E 06 3A 0B 8B 5E   8.&..... ....:..^
9C90:  F0 D1 E3 26 F7 AF 42 00  8B D8 C4 76 FC 26 8B 00   ...&..B. ...v.&..
9CA0:  8B 5E F2 8B CB D1 E3 03  D9 D1 E3 C4 76 EC 26 89   .^...... ....v.&.
9CB0:  00 B8 1A 00 8E 06 3A 0B  8B 5E F0 D1 E3 26 F7 AF   ......:. .^...&..
9CC0:  42 00 8B F0 C4 5E FC 26  8B 40 02 8B 76 F2 8B CE   B....^.& .@..v...
9CD0:  D1 E6 03 F1 D1 E6 C4 5E  EC 26 89 40 02 8E 06 3A   .......^ .&.@...:
9CE0:  0B 8B 5E F0 D1 E3 26 8B  87 42 00 8B 76 F2 8B CE   ..^...&. .B..v...
9CF0:  D1 E6 03 F1 D1 E6 C4 5E  EC 26 89 40 04 E9 2E FF   .......^ .&.@....
9D00:  B8 00 00 E9 00 00 5E 5F  8B E5 5D CB 55 8B EC 81   ......^_ ..].U...
9D10:  EC 00 00 57 56 5E 5F 8B  E5 5D CB 00 55 8B EC 81   ...WV^_. .]..U...
9D20:  EC 00 00 57 56 83 7E 06  5A 7E 03 E9 18 00 83 7E   ...WV.~. Z~......
9D30:  06 00 7D 03 E9 0F 00 8B  5E 06 D1 E3 8B 87 30 03   ..}..... ^.....0.
9D40:  E9 5E 00 E9 5B 00 81 7E  06 B4 00 7E 03 E9 1B 00   .^..[..~ ...~....
9D50:  83 7E 06 5A 7F 03 E9 12  00 BB 98 04 8B 46 06 D1   .~.Z.... .....F..
9D60:  E0 2B D8 8B 07 E9 39 00  E9 36 00 81 7E 06 0E 01   .+....9. .6..~...
9D70:  7E 03 E9 1B 00 81 7E 06  B4 00 7D 03 E9 11 00 8B   ~.....~. ..}.....
9D80:  5E 06 D1 E3 8B 87 C8 01  F7 D8 E9 14 00 E9 11 00   ^....... ........
9D90:  BB 00 06 8B 46 06 D1 E0  2B D8 8B 07 F7 D8 E9 00   ....F... +.......
9DA0:  00 5E 5F 8B E5 5D CB 55  8B EC 81 EC 00 00 57 56   .^_..].U ......WV
9DB0:  83 7E 06 5A 7E 03 E9 18  00 83 7E 06 00 7D 03 E9   .~.Z~... ..~..}..
9DC0:  0F 00 8B 5E 06 D1 E3 8B  87 7A 02 E9 5E 00 E9 5B   ...^.... .z..^..[
9DD0:  00 81 7E 06 B4 00 7E 03  E9 1D 00 83 7E 06 5A 7F   ..~...~. ....~.Z.
9DE0:  03 E9 14 00 BB E2 03 8B  46 06 D1 E0 2B D8 8B 07   ........ F...+...
9DF0:  F7 D8 E9 37 00 E9 34 00  81 7E 06 0E 01 7E 03 E9   ...7..4. .~...~..
9E00:  1B 00 81 7E 06 B4 00 7D  03 E9 11 00 8B 5E 06 D1   ...~...} .....^..
9E10:  E3 8B 87 12 01 F7 D8 E9  12 00 E9 0F 00 BB 4A 05   ........ ......J.
9E20:  8B 46 06 D1 E0 2B D8 8B  07 E9 00 00 5E 5F 8B E5   .F...+.. ....^_..
9E30:  5D CB 55 8B EC 81 EC 04  00 57 56 8B 46 08 0B 46   ].U..... .WV.F..F
9E40:  06 74 03 E9 09 00 B8 00  00 BA 00 00 E9 54 00 C7   .t...... .....T..
9E50:  46 FE E8 03 C7 46 FC E7  03 8B 46 FE 39 46 FC 7C   F....F.. ..F.9F.|
9E60:  03 E9 38 00 8B 46 FC 89  46 FE B8 02 00 BA 00 00   ..8..F.. F.......
9E70:  52 50 8B 46 FE 99 52 50  FF 76 08 FF 76 06 9A C4   RP.F..RP .v..v...
9E80:  2C AF 0D 8B C8 8B 46 FE  8B DA 99 03 C1 13 D3 52   ,.....F. .......R
9E90:  50 9A C4 2C AF 0D 89 46  FC E9 BD FF 8B 46 FC 99   P..,...F .....F..
9EA0:  E9 00 00 5E 5F 8B E5 5D  CB 55 8B EC 81 EC 06 00   ...^_..] .U......
9EB0:  57 56 83 7E 08 00 74 03  E9 1A 00 83 7E 06 00 74   WV.~..t. ....~..t
```

```
9EC0:  03 E9 09 00 B8 FF FF E9  AF 00 E9 05 00 C7 46 FE   ........ ......F.
9ED0:  5A 00 E9 7A 00 83 7E 06  00 74 03 E9 08 00 C7 46   Z..z..~. .t.....F
9EE0:  FE 00 00 E9 69 00 FF 76  08 9A 32 2C AF 0D 83 C4   ....i..v ..2,....
9EF0:  02 89 46 FC FF 76 06 9A  32 2C AF 0D 83 C4 02 89   ..F..v.. 2,......
9F00:  46 FA 8B 46 FC 39 46 FA  7C 03 E9 21 00 8B 46 FC   F..F.9F. |..!..F.
9F10:  99 52 50 B8 64 00 F7 6E  FA 52 50 9A C4 2C AF 0D   .RP.d..n .RP..,..
9F20:  8B D8 D1 E3 8B 87 B0 01  89 46 FE E9 21 00 8B 46   ........ .F..!..F
9F30:  FA 99 52 50 B8 64 00 F7  6E FC 52 50 9A C4 2C AF   ..RP.d.. n.RP..,.
9F40:  0D 8B D8 D1 E3 B8 5A 00  2B 87 B0 01 89 46 FE 83   ......Z. +....F..
9F50:  7E 08 00 7C 03 E9 09 00  B8 B4 00 2B 46 FE 89 46   ~..|.... ...+F..F
9F60:  FE 83 7E 06 00 7F 03 E9  09 00 B8 68 01 2B 46 FE   ..~..... ...h.+F.
9F70:  89 46 FE 8B 46 FE E9 00  00 5E 5F 8B E5 5D CB 55   .F..F... .^_..].U
9F80:  8B EC 81 EC 06 00 57 56  C7 46 FE 01 00 8B 46 06   ......WV .F....F.
9F90:  89 46 FA 81 7E FA B4 00  7D 03 E9 05 00 81 6E FA   .F..~... }.....n.
9FA0:  B4 00 83 7E FA 5A 74 03  E9 06 00 B8 FF FF E9 2C   ...~.Zt. .......,
9FB0:  00 83 7E FA 5A 7F 03 E9  0E 00 B8 B4 00 2B 46 FA   ..~.Z... .....+F.
9FC0:  89 46 FA C7 46 FE FF FF  8B 5E FA D1 E3 8B 87 FC   .F..F... .^......
9FD0:  00 F7 6E FE 89 46 FC 8B  46 FC E9 00 00 5E 5F 8B   ..n..F.. F....^_.
9FE0:  E5 5D CB 00 55 8B EC 81  EC 06 00 57 56 C7 46 FE   .]..U... ...WV.F.
9FF0:  00 00 C7 46 FA 00 00 E9  03 00 FF 46 FA 8B 46 FA   ...F.... ...F..F.
A000:  39 46 0E 7F 03 E9 65 00  8B 5E FA D1 E3 C4 76 0A   9F....e. .^....v.
A010:  26 8B 00 89 46 FC 83 7E  FC FF 74 03 E9 03 00 E9   &...F..~ ..t.....
A020:  D8 FF 83 7E FC FF 75 03  E9 3F 00 B8 1A 00 F7 6E   ...~..u. .?.....n
A030:  FC 8B F0 C4 5E 06 26 F6  40 18 08 75 03 E9 13 00   ....^.&. @..u....
A040:  8B 5E FE D1 E3 D1 E3 C4  76 10 8B 46 FC 26 89 00   .^...... v..F.&..
A050:  FF 46 FE FF 76 FC FF 76  08 FF 76 06 9A 0C 00 AA   .F..v..v ..v.....
A060:  08 83 C4 06 89 46 FC E9  B8 FF E9 8D FF 8B 46 FE   .....F.. ......F.
A070:  C4 5E 14 26 89 07 5E 5F  8B E5 5D CB 55 8B EC 81   .^.&..^_ ..].U...
A080:  EC 00 00 57 56 B8 2A 00  B9 AA 14 51 50 B8 1E CB   ...WV.*. ...QP...
A090:  B9 AA 14 51 50 8E 06 3C  0B 26 FF 36 6E 08 B8 92   ...QP..< .&.6n...
A0A0:  08 06 50 B8 7A 0C 06 50  9A 04 00 DE 09 83 C4 12   ..P.z..P ........
A0B0:  B8 14 00 B9 AA 14 51 50  B8 FC C7 B9 AA 14 51 50   ......QP ......QP
A0C0:  8E 06 3E 0B 26 FF 36 00  00 B8 24 00 06 50 B8 0C   ..>.&.6. ..$..P..
A0D0:  04 06 50 9A 04 00 DE 09  83 C4 12 B8 7A C9 B9 62   ..P..... ....z..b
A0E0:  23 51 50 9A 34 01 DE 09  83 C4 04 FF 76 14 FF 76   #QP.4... ....v..v
A0F0:  12 FF 76 10 FF 76 0E FF  76 0C FF 76 0A FF 76 08   ..v..v.. v..v..v.
A100:  FF 76 06 9A 4C 02 DE 09  83 C4 10 E9 00 00 5E 5F   .v..L... ......^_
A110:  8B E5 5D CB 55 8B EC 81  EC 12 00 57 56 C7 46 FE   ..].U... ...WV.F.
A120:  00 00 C7 46 FA 00 00 E9  03 00 FF 46 FA 8E 06 40   ...F.... ...F...@
A130:  0B 8B 46 FA 26 39 06 2A  00 7F 03 E9 DF 00 83 7E   ..F.&9.* .......~
A140:  FE 32 7C 03 E9 D6 00 8D  46 EE 16 50 B8 1A 00 8E   .2|..... F..P....
A150:  06 42 0B 8B 5E FA D1 E3  D1 E3 26 F7 AF 1E CB 05   .B..^... ..&.....
A160:  7E 0C B9 AA 14 51 50 9A  0A 00 89 08 83 C4 08 C7   ~....QP. ........
A170:  46 FC 00 00 E9 03 00 FF  46 FC 8E 06 44 0B 8B 46   F....... F...D..F
A180:  FC 26 39 06 14 00 7F 03  E9 8F 00 83 7E FE 32 7C   .&9..... ....~.2|
A190:  03 E9 86 00 8D 46 F4 16  50 B8 1A 00 8E 06 46 0B   .....F.. P.....F.
A1A0:  8B 5E FC D1 E3 D1 E3 26  F7 AF FC C7 05 10 04 B9   .^.....& ........
A1B0:  62 23 51 50 9A 0A 00 89  08 83 C4 08 8D 46 F4 16   b#QP.... .....F..
A1C0:  50 8D 46 EE 16 50 9A FC  00 89 08 83 C4 08 3D 00   P.F..P.. ......=.
A1D0:  00 75 03 E9 41 00 8E 06  42 0B 8B 5E FA D1 E3 D1   .u..A... B..^....
A1E0:  E3 26 8B 87 1E CB 8E 06  48 0B B1 03 8B 5E FE D3   .&...... H....^..
A1F0:  E3 26 89 87 52 CE 8E 06  46 0B 8B 5E FC D1 E3 D1   .&..R... F..^....
A200:  E3 26 8B 87 FC C7 8B 5E  FE D3 E3 8E 06 48 0B 26   .&.....^ .....H.&
```

```
A210:  89 87 54 CE FF 46 FE E9  5D FF E9 0D FF 8B 46 FE   ..T..F.. ].....F.
A220:  C4 5E 06 26 89 07 5E 5F  8B E5 5D CB 55 8B EC 81   .^.&..^_ ..].U...
A230:  EC 28 00 57 56 B8 00 00  89 46 E0 89 46 E2 C7 46   .(.WV... .F..F..F
A240:  E4 00 00 E9 03 00 FF 46  E4 8E 06 4A 0B 8B 46 E4   .......F ...J..F.
A250:  26 39 06 7A C9 7F 03 E9  15 00 8E 06 48 0B B1 03   &9.z.... ....H...
A260:  8B 5E E4 D3 E3 26 C7 87  58 CE 00 00 E9 D7 FF C7   .^...&.. X.......
A270:  46 E6 00 00 E9 03 00 FF  46 E6 8E 06 4A 0B 8B 46   F....... F...J..F
A280:  E6 26 39 06 7A C9 7F 03  E9 AB 04 8E 06 48 0B B1   .&9.z... .....H..
A290:  03 8B 5E E6 D3 E3 26 8B  87 52 CE 89 46 F6 8B 5E   ..^...&. .R..F..^
A2A0:  E6 D3 E3 26 8B 87 54 CE  89 46 FE C7 46 E4 00 00   ...&..T. .F..F...
A2B0:  E9 03 00 FF 46 E4 8E 06  4A 0B 8B 46 E4 26 39 06   ....F... J..F.&9.
A2C0:  7A C9 7F 03 E9 15 00 8E  06 48 0B B1 03 8B 5E E4   z....... .H....^.
A2D0:  D3 E3 26 C7 87 56 CE 00  00 E9 D7 FF B8 00 00 89   ..&..V.. ........
A2E0:  46 E8 89 46 F2 C7 46 EA  14 00 C7 46 E4 00 00 E9   F..F..F. ...F....
A2F0:  03 00 FF 46 E4 8E 06 4A  0B 8B 46 E4 26 39 06 7A   ...F...J ..F.&9.z
A300:  C9 7F 03 E9 75 03 8B 46  E6 39 46 E4 75 03 E9 48   ....u..F .9F.u..H
A310:  00 8E 06 48 0B B1 03 8B  5E E4 D3 E3 26 83 BF 56   ...H.... ^...&..V
A320:  CE FF 75 03 E9 32 00 8B  5E E6 D3 E3 26 8B 87 52   ..u..2.. ^...&..R
A330:  CE 8B 5E E4 D3 E3 26 39  87 52 CE 75 03 E9 19 00   ..^...&9 .R.u....
A340:  8B 5E E6 D3 E3 26 8B 87  54 CE 8B 5E E4 D3 E3 26   .^...&.. T..^...&
A350:  39 87 54 CE 74 03 E9 03  00 E9 96 FF 8E 06 48 0B   9.T.t... ......H.
A360:  B1 03 8B 5E E4 D3 E3 26  8B 87 52 CE 89 46 F0 8B   ...^...& ..R..F..
A370:  5E E4 D3 E3 26 8B 87 54  CE 89 46 FC B8 1A 00 F7   ^...&..T ..F.....
A380:  6E FC 8B D8 8E 06 3E 0B  26 8B 87 0C 04 8B D0 B8   n.....>. &.......
A390:  1A 00 8B DA F7 6E F0 8B  F0 8E 06 3C 0B 26 2B 9C   .....n.. ...<.&+.
A3A0:  7A 0C B8 1A 00 F7 6E FE  8B F0 8E 06 3E 0B 26 2B   z.....n. ....>.&+
A3B0:  9C 0C 04 B8 1A 00 F7 6E  F6 8B F0 8E 06 3C 0B 26   .......n .....<.&
A3C0:  03 9C 7A 0C 53 9A 32 2C  AF 0D 83 C4 02 89 46 FA   ..z.S.2, ......F.
A3D0:  B8 1A 00 F7 6E FC 8B D8  8E 06 3E 0B 26 8B 87 0E   ....n... ..>.&...
A3E0:  04 8B C8 B8 1A 00 F7 6E  F0 8B D8 8E 06 3C 0B 26   .......n .....<.&
A3F0:  2B 8F 7C 0C B8 1A 00 F7  6E FE 8B D8 8E 06 3E 0B   +.|..... n.....>.
A400:  26 2B 8F 0E 04 B8 1A 00  F7 6E F6 8B D8 8E 06 3C   &+...... .n.....<
A410:  0B 26 03 8F 7C 0C 51 9A  32 2C AF 0D 83 C4 02 89   .&..|.Q. 2,......
A420:  46 F4 B8 1A 00 F7 6E F0  8B D8 8E 06 3C 0B B8 1A   F.....n. ....<...
A430:  00 F7 6E F6 8B F0 26 8B  84 7C 0C 26 2B 87 7C 0C   ..n...&. .|.&+.|.
A440:  99 52 50 52 50 9A 5E 2D  AF 0D 8B C8 B8 1A 00 8B   .RPRP.^- ........
A450:  DA F7 6E F0 8B F0 8E 06  3C 0B B8 1A 00 F7 6E F6   ..n..... <.....n.
A460:  8B F8 26 8B 85 7A 0C 26  2B 84 7A 0C 99 52 50 52   ..&..z.& +.z..RPR
A470:  50 8B F1 8B FB 9A 5E 2D  AF 0D 03 F0 13 FA 57 56   P.....^- ......WV
A480:  9A 22 01 B1 09 83 C4 04  89 46 EE B8 1A 00 F7 6E   .”...... .F.....n
A490:  FC 8B D8 8E 06 3E 0B B8  1A 00 F7 6E FE 8B F0 26   .....>.. ...n...&
A4A0:  8B 84 0E 04 26 2B 87 0E  04 99 52 50 52 50 9A 5E   ....&+.. ..RPRP.^
A4B0:  2D AF 0D 8B C8 B8 1A 00  8B DA F7 6E FC 8B F0 8E   -....... ...n....
A4C0:  06 3E 0B B8 1A 00 F7 6E  FE 8B F8 26 8B 85 0C 04   .>.....n ...&....
A4D0:  26 2B 84 0C 04 99 52 50  52 50 8B F1 8B FB 9A 5E   &+....RP RP.....^
A4E0:  2D AF 0D 03 F0 13 FA 57  56 9A 22 01 B1 09 83 C4   -......W V.".....
A4F0:  04 89 46 F8 8B 46 EE 2B  46 F8 50 9A 32 2C AF 0D   ..F..F.+ F.P.2,..
A500:  83 C4 02 89 46 DA B8 1A  00 F7 6E F0 8B D8 8E 06   ....F... ..n.....
A510:  3C 0B 26 FF B7 7C 0C B8  1A 00 F7 6E F0 8B D8 26   <.&..|.. ...n...&
A520:  FF B7 7A 0C B8 1A 00 F7  6E F6 8B D8 26 FF B7 7C   ..z..... n...&..|
A530:  0C B8 1A 00 F7 6E F6 8B  D8 26 FF B7 7A 0C B8 1A   .....n.. .&..z...
A540:  00 F7 6E FC 8B D8 8E 06  3E 0B 26 FF B7 0E 04 B8   ..n..... >.&.....
A550:  1A 00 F7 6E FC 8B D8 26  FF B7 0C 04 B8 1A 00 F7   ...n...& ........
```

```
A560:  6E FE 8B D8 26 FF B7 0E  04 B8 1A 00 F7 6E FE 8B   n...&... .....n..
A570:  D8 26 FF B7 0C 04 9A 8E  01 AA 08 83 C4 10 50 9A   .&...... ......P.
A580:  32 2C AF 0D 83 C4 02 89  46 EC 83 7E FA 14 7C 03   2,...... F..¯..|.
A590:  E9 E5 00 83 7E F4 14 7C  03 E9 DC 00 83 7E DA 14   ....¯..| ......¯..
A5A0:  7C 03 E9 D3 00 FF 76 EC  9A 32 2C AF 0D 83 C4 02   |.....v. .2,.....
A5B0:  3D 12 00 7C 03 E9 C0 00  8E 06 48 0B B1 03 8B 5E   =..|.... ..H....^
A5C0:  E6 D3 E3 26 C7 87 56 CE  01 00 8B 5E E4 D3 E3 26   ...&..V. ...^...&
A5D0:  C7 87 56 CE 01 00 FF 46  F2 8B 46 DA 01 46 E8 8B   ..V....F ..F..F..
A5E0:  46 EA 39 46 DA 7C 03 E9  0C 00 8B 46 DA 89 46 EA   F.9F.|.. ...F..F.
A5F0:  8B 46 E4 89 46 D8 C7 46  DE 00 00 E9 03 00 FF 46   .F..F..F .......F
A600:  DE 8E 06 4A 0B 8B 46 DE  26 39 06 7A C9 7F 03 E9   ...J..F. &9.z....
A610:  66 00 8B 46 E6 39 46 DE  75 03 E9 0B 00 8B 46 E4   f..F.9F. u.....F.
A620:  39 46 DE 74 03 E9 03 00  E9 D3 FF 8E 06 48 0B B1   9F.t.... .....H..
A630:  03 8B 5E E4 D3 E3 26 8B  87 52 CE 8B 5E DE D3 E3   ..^...&. .R..^...
A640:  26 39 87 52 CE 75 03 E9  19 00 8B 5E E4 D3 E3 26   &9.R.u.. ...^...&
A650:  8B 87 54 CE 8B 5E DE D3  E3 26 39 87 54 CE 74 03   ..T..^.. .&9.T.t.
A660:  E9 12 00 8E 06 48 0B B1  03 8B 5E DE D3 E3 26 C7   .....H.. ..^...&.
A670:  87 56 CE FF FF E9 86 FF  E9 77 FC 8B 46 F2 39 46   .V...... .w..F.9F
A680:  E0 7D 03 E9 16 00 8B 46  F2 39 46 E0 74 03 E9 A2   .}.....F .9F.t...
A690:  00 8B 46 E8 39 46 E2 7F  03 E9 97 00 8E 06 48 0B   ..F.9F.. ......H.
A6A0:  B1 03 8B 5E E6 D3 E3 26  8B 87 54 CE C4 5E 0E 26   ...^...& ..T..^.&
A6B0:  89 07 8E 06 48 0B 8B 5E  D8 D3 E3 26 8B 87 54 CE   ....H..^ ...&..T.
A6C0:  C4 5E 12 26 89 07 8E 06  48 0B 8B 5E E6 D3 E3 26   .^.&.... H..^...&
A6D0:  8B 87 52 CE C4 5E 06 26  89 07 8E 06 48 0B 8B 5E   ..R..^.& ....H..^
A6E0:  D8 D3 E3 26 8B 87 52 CE  C4 5E 0A 26 89 07 8B 46   ...&..R. .^.&...F
A6F0:  F2 89 46 E0 8B 46 E8 89  46 E2 C7 46 DE 00 00 E9   ..F..F.. F..F....
A700:  03 00 FF 46 DE 8E 06 4A  0B 8B 46 DE 26 39 06 7A   ...F...J ..F.&9.z
A710:  C9 7F 03 E9 1D 00 8E 06  48 0B B1 03 8B 5E DE D3   ........ H....^..
A720:  E3 26 8B 87 56 CE 8B 5E  DE D3 E3 26 89 87 58 CE   .&..V..^ ...&..X.
A730:  E9 CF FF E9 41 FB C7 46  DC 00 00 C7 46 DE 00 00   ....A..F ....F...
A740:  E9 03 00 FF 46 DE 8E 06  4A 0B 8B 46 DE 26 39 06   ....F... J..F.&9.
A750:  7A C9 7F 03 E9 9B 00 8E  06 48 0B B1 03 8B 5E DE   z....... .H....^.
A760:  D3 E3 26 83 BF 58 CE 00  7F 03 E9 82 00 8B 5E DE   ..&..X.. ......^.
A770:  D3 E3 26 8B 87 54 CE 89  46 FE 8B 5E DE D3 E3 26   ..&..T.. F..^...&
A780:  8B 87 52 CE 89 46 F6 B8  1A 00 F7 6E FE 8B D8 8E   ..R..F.. ...n....
A790:  06 3E 0B 26 8B 87 0C 04  8B C8 B8 1A 00 F7 6E F6   .>.&.... ......n.
A7A0:  8B D8 8E 06 3C 0B 26 2B  8F 7A 0C 89 4E FA B8 1A   ....<.&+ .z..N...
A7B0:  00 F7 6E FE 8B D8 8E 06  3E 0B 26 8B 87 0E 04 8B   ..n..... >.&.....
A7C0:  C8 B8 1A 00 F7 6E F6 8B  D8 8E 06 3C 0B 26 2B 8F   .....n.. ...<.&+.
A7D0:  7C 0C 89 4E F4 83 7E DC  0A 7C 03 E9 11 00 FF 76   |..N..¯. .|.....v
A7E0:  F4 FF 76 FA 9A 5F 29 5F  03 83 C4 04 FF 46 DC E9   ..v.._)_ .....F..
A7F0:  51 FF 83 7E E0 00 7F 03  E9 23 00 FF 76 EA C4 5E   Q..¯.... .#..v..^
A800:  0A 26 FF 37 C4 5E 06 26  FF 37 C4 5E 12 26 FF 37   .&.7.^.& .7.^.&.7
A810:  C4 5E 0E 26 FF 37 9A 5E  26 5F 03 83 C4 0A 8B 46   .^.&.7.^ &_.....F
A820:  E0 E9 00 00 5E 5F 8B E5  5D CB 55 8B EC 81 EC 08   ....^_.. ].U.....
A830:  00 57 56 FF 76 0E FF 76  14 FF 76 0C FF 76 0A 9A   .WV.v..v ..v..v..
A840:  97 01 89 08 83 C4 08 89  46 F8 FF 76 0E FF 76 18   ........ F..v..v.
A850:  FF 76 0C FF 76 0A 9A 97  01 89 08 83 C4 08 89 46   .v..v... .......F
A860:  FC C7 46 FE 00 00 8B 46  F8 89 46 FA E9 03 00 FF   ..F....F ..F.....
A870:  46 FA 8B 46 FC 39 46 FA  7E 03 E9 AC 00 81 7E FE   F..F.9F. ¯......¯.
A880:  C8 00 7C 03 E9 A2 00 8B  76 FA 8B C6 D1 E6 03 F0   ..|..... v.......
A890:  D1 E6 C4 5E 0A 8B 46 16  26 39 40 02 7D 03 E9 85   ...^..F. &9@.}...
A8A0:  00 8B 76 FA 8B C6 D1 E6  03 F0 D1 E6 C4 5E 0A 8B   ..v..... .....^..
```

```
A8B0:  46 1A 26 39 40 02 7E 03  E9 6B 00 B8 1A 00 8B 76   F.&9@.~. .k.....v
A8C0:  FA 8B CE D1 E6 03 F1 D1  E6 C4 5E 0A 26 F7 68 04   ........ ..^.&.h.
A8D0:  8B F0 C4 5E 06 26 F6 40  18 01 75 03 E9 47 00 B8   ...^.&.@ ..u..G..
A8E0:  1A 00 8B 76 FA 8B CE D1  E6 03 F1 D1 E6 C4 5E 0A   ...v.... ......^.
A8F0:  26 F7 68 04 8B F0 C4 5E  06 26 F6 40 18 10 75 03   &.h....^ .&.@..u.
A900:  E9 23 00 8B 76 FE D1 E6  D1 E6 C4 5E 10 26 C7 40   .#..v... ...^.&.@
A910:  02 00 00 8B 5E FE D1 E3  D1 E3 C4 76 10 8B 46 FA   ....^... ...v..F.
A920:  26 89 00 FF 46 FE E9 46  FF 8B 46 FE E9 00 00 5E   &...F..F ..F....^
A930:  5F 8B E5 5D CB 55 8B EC  81 EC 16 00 57 56 C7 46   _..].U.. ....WV.F
A940:  FE 00 00 C7 46 EE 00 00  E9 03 00 FF 46 EE 8B 46   ....F... ....F..F
A950:  08 39 46 EE 7C 03 E9 F7  02 81 7E FE C8 00 7C 03   .9F.|... ..~...|.
A960:  E9 ED 02 8E 06 42 0B 8B  5E EE D1 E3 D1 E3 26 8B   .....B.. ^.....&.
A970:  9F 1E CB 8B C3 D1 E3 03  D8 D1 E3 8E 06 3C 0B 26   ........ .....<.&
A980:  8B 87 D6 A4 89 46 F8 B8  1A 00 F7 6E F8 8B D8 26   .....F.. ...n...&
A990:  F6 87 92 0C 08 75 03 E9  1E 00 B8 52 08 B9 AA 14   .....u.. ...R....
A9A0:  51 50 B8 1A 00 F7 6E F8  05 7E 0C 06 50 9A 0A 00   QP....n. .~..P...
A9B0:  89 08 83 C4 08 E9 44 00  B8 1A 00 F7 6E F8 8B D8   ......D. ....n...
A9C0:  8E 06 3C 0B 26 8B 87 86  0C 8B C8 B8 1A 00 F7 6E   ..<.&... .......n
A9D0:  F8 8B D8 26 3B 8F 8C 0C  7C 03 E9 05 00 26 8B 8F   ...&;... |....&..
A9E0:  8C 0C B8 1A 00 F7 6E F8  8B D8 26 3B 8F 80 0C 7C   ......n. ..&;...|
A9F0:  03 E9 05 00 26 8B 8F 80  0C 89 4E F0 C7 46 F2 00   ....&... ..N..F..
AA00:  00 E9 03 00 FF 46 F2 8B  46 06 39 46 F2 7C 03 E9   .....F.. F.9F.|..
AA10:  3B 02 81 7E FE C8 00 7C  03 E9 31 02 8E 06 46 0B   ;..~...| ..1...F.
AA20:  8B 5E F2 D1 E3 D1 E3 26  8B 9F FC C7 8B C3 D1 E3   .^.....& ........
AA30:  03 D8 D1 E3 8E 06 3E 0B  26 8B 87 68 9C 89 46 FC   ......>. &..h..F.
AA40:  8E 06 42 0B 8B 5E EE D1  E3 D1 E3 26 8B 9F 1E CB   ..B..^.. ...&....
AA50:  8B C3 D1 E3 03 D8 D1 E3  8E 06 3C 0B 26 8B 87 D2   ........ ..<.&...
AA60:  A4 89 46 EC 8E 06 42 0B  8B 5E EE D1 E3 D1 E3 26   ..F...B. .^.....&
AA70:  8B 9F 1E CB 8B C3 D1 E3  03 D8 D1 E3 8E 06 3C 0B   ........ ......<.
AA80:  26 8B 87 D4 A4 89 46 EA  B8 1A 00 F7 6E FC 8B D8   &.....F. ....n...
AA90:  8E 06 3E 0B 8B 46 EC 26  2B 87 0C 04 89 46 FA B8   ..>..F.& +....F..
AAA0:  1A 00 F7 6E FC 8B D8 8B  46 EA 26 2B 87 0E 04 89   ...n.... F.&+....
AAB0:  46 F6 FF 76 FA 9A 32 2C  AF 0D 83 C4 02 3D 28 00   F..v..2, .....=(.
AAC0:  7E 03 E9 13 00 FF 76 F6  9A 32 2C AF 0D 83 C4 02   ~.....v. .2,.....
AAD0:  3D 28 00 7F 03 E9 03 00  E9 29 FF B8 1A 00 F7 6E   =(...... .)......n
AAE0:  F8 8B D8 8E 06 3C 0B 26  F6 87 92 0C 08 74 03 E9   .....<.& .....t..
AAF0:  17 00 B8 1A 00 F7 6E FC  8B D8 8E 06 3E 0B 26 F6   ......n. ....>.&.
AB00:  87 24 04 08 74 03 E9 2E  00 B8 1A 00 F7 6E F8 8B   .$..t... .....n..
AB10:  D8 8E 06 3C 0B 26 F6 87  92 0C 08 75 03 E9 1A 00   ...<.&.. ...u....
AB20:  B8 1A 00 F7 6E FC 8B D8  8E 06 3E 0B 26 F6 87 24   ....n... ..>.&..$
AB30:  04 08 74 03 E9 03 00 E9  CA FE B8 1A 00 F7 6E FC   ..t..... ......n.
AB40:  8B D8 8E 06 3E 0B 26 F6  87 24 04 08 75 03 E9 7B   ....>.&. .$..u..{
AB50:  00 B8 1A 00 F7 6E F8 8B  D8 8E 06 3C 0B 26 F6 87   .....n.. ...<.&..
AB60:  92 0C 08 75 03 E9 64 00  B8 4A 08 B9 AA 14 51 50   ...u..d. .J....QP
AB70:  B8 1A 00 F7 6E FC 05 10  04 BA 62 23 52 50 9A 0A   ....n... ..b#RP..
AB80:  00 89 08 83 C4 08 B8 4A  08 B9 AA 14 51 50 B8 52   .......J ....QP.R
AB90:  08 B9 AA 14 51 50 9A FC  00 89 08 83 C4 08 3D 00   ....QP.. ......=.
ABA0:  00 75 03 E9 23 00 8B 46  FC 8E 06 48 0B B1 03 8B   .u..#..F ...H....
ABB0:  5E FE D3 E3 26 89 87 54  CE 8B 46 F8 8B 5E FE D3   ^...&..T ..F..^..
ABC0:  E3 26 89 87 52 CE FF 46  FE E9 7E 00 B8 1A 00 F7   .&..R..F ..~.....
ABD0:  6E FC 8B D8 8E 06 3E 0B  26 8B 87 18 04 8B C8 B8   n.....>. &.......
ABE0:  1A 00 F7 6E FC 8B D8 26  3B 8F 1E 04 7C 03 E9 05   ...n...& ;...|...
ABF0:  00 26 8B 8F 1E 04 B8 1A  00 F7 6E FC 8B D8 26 3B   .&...... ..n...&;
```

```
AC00:  8F 12 04 7C 03 E9 05 00  26 8B 8F 12 04 89 4E F4   ...|.... &.....N.
AC10:  8B 46 F4 2B 46 F0 50 9A  32 2C AF 0D 83 C4 02 3D   .F.+F.P. 2,.....=
AC20:  12 00 7C 03 E9 23 00 8B  46 FC 8E 06 48 0B B1 03   ..|..#.. F...H...
AC30:  8B 5E FE D3 E3 26 89 87  54 CE 8B 46 F8 8B 5E FE   .^...&.. T..F..^.
AC40:  D3 E3 26 89 87 52 CE FF  46 FE E9 B7 FD E9 FB FC   ..&..R.. F.......
AC50:  8B 46 FE 8E 06 4A 0B 26  A3 7A C9 5E 5F 8B E5 5D   .F...J.& .z.^_..]
AC60:  CB 55 8B EC 81 EC 16 00  57 56 B8 00 00 C4 5E 0E   .U...... WV....^.
AC70:  26 89 07 C4 5E 0A 26 89  07 C7 46 EE 00 00 E9 03   &...^.&. ..F.....
AC80:  00 FF 46 EE 8B 46 EE 39  46 08 7F 03 E9 EE 04 8E   ..F..F.9 F.......
AC90:  06 42 0B 8B 5E EE D1 E3  D1 E3 26 83 BF 20 CB 00   .B..^... ..&.. ..
ACA0:  75 03 E9 03 00 E9 D9 FF  8E 06 42 0B 8B 5E EE D1   u....... ..B..^..
ACB0:  E3 D1 E3 26 8B 9F 1E CB  8B C3 D1 E3 03 D8 D1 E3   ...&.... ........
ACC0:  8E 06 3C 0B 26 8B 87 D6  A4 89 46 FA C7 46 F6 00   ..<.&... ..F..F..
ACD0:  00 B8 1A 00 F7 6E FA 8B  D8 26 F6 87 92 0C 08 75   .....n.. .&.....u
ACE0:  03 E9 1E 00 B8 52 08 B9  AA 14 51 50 B8 1A 00 F7   .....R.. ..QP....
ACF0:  6E FA 05 7E 0C 06 50 9A  0A 00 89 08 83 C4 08 E9   n..~..P. ........
AD00:  44 00 B8 1A 00 F7 6E FA  8B D8 8E 06 3C 0B 26 8B   D.....n. ....<.&.
AD10:  87 86 0C 8B C8 B8 1A 00  F7 6E FA 8B D8 26 3B 8F   ........ .n...&;.
AD20:  8C 0C 7C 03 E9 05 00 26  8B 8F 8C 0C B8 1A 00 F7   ..|....& ........
AD30:  6E FA 8B D8 26 3B 8F 80  0C 7C 03 E9 05 00 26 8B   n...&;.. .|....&.
AD40:  8F 80 0C 89 4E F0 C7 46  F2 00 00 E9 03 00 FF 46   ....N..F .......F
AD50:  F2 8B 46 F2 39 46 06 7F  03 E9 44 03 8E 06 46 0B   ..F.9F.. ..D...F.
AD60:  8B 5E F2 D1 E3 D1 E3 26  83 BF FE C7 00 75 03 E9   .^.....& .....u..
AD70:  03 00 E9 D9 FF 8E 06 46  0B 8B 5E F2 D1 E3 D1 E3   .......F ..^.....
AD80:  26 8B 9F FC C7 8B C3 D1  E3 03 D8 D1 E3 8E 06 3E   &....... .......>
AD90:  0B 26 8B 87 68 9C 89 46  FE 8E 06 42 0B 8B 5E EE   .&..h..F ...B..^.
ADA0:  D1 E3 D1 E3 26 8B 9F 1E  CB 8B C3 D1 E3 03 D8 D1   ....&... ........
ADB0:  E3 8E 06 3C 0B 26 8B 87  D2 A4 89 46 EC 8E 06 42   ...<.&.. ...F...B
ADC0:  0B 8B 5E EE D1 E3 D1 E3  26 8B 9F 1E CB 8B C3 D1   ..^..... &.......
ADD0:  E3 03 D8 D1 E3 8E 06 3C  0B 26 8B 87 D4 A4 89 46   .......< .&.....F
ADE0:  EA B8 1A 00 F7 6E FE 8B  D8 8E 06 3E 0B 8B 46 EC   .....n.. ...>..F.
ADF0:  26 2B 87 0C 04 89 46 FC  B8 1A 00 F7 6E FE 8B D8   &+....F. ....n...
AE00:  8B 46 EA 26 2B 87 0E 04  89 46 F8 FF 76 FC 9A 32   .F.&+... .F..v..2
AE10:  2C AF 0D 83 C4 02 3D 14  00 7E 03 E9 13 00 FF 76   ,.....=. .~.....v
AE20:  F8 9A 32 2C AF 0D 83 C4  02 3D 14 00 7F 03 E9 03   ..2,.... .=......
AE30:  00 E9 1A FF B8 1A 00 F7  6E FA 8B D8 8E 06 3C 0B   ........ n.....<.
AE40:  26 F6 87 92 0C 08 74 03  E9 1A 00 B8 1A 00 F7 6E   &.....t. .......n
AE50:  FE 8B D8 8E 06 3E 0B 26  F6 87 24 04 08 75 03 E9   .....>.& ..$..u..
AE60:  03 00 E9 E9 FE B8 1A 00  F7 6E FE 8B D8 8E 06 3E   ........ .n.....>
AE70:  0B 26 F6 87 24 04 08 75  03 E9 BF 00 B8 1A 00 F7   .&..$..u ........
AE80:  6E FA 8B D8 8E 06 3C 0B  26 F6 87 92 0C 08 75 03   n.....<. &.....u.
AE90:  E9 A8 00 B8 4A 08 B9 AA  14 51 50 B8 1A 00 F7 6E   ....J... .QP....n
AEA0:  FE 05 10 04 BA 62 23 52  50 9A 0A 00 89 08 83 C4   .....b#R P.......
AEB0:  08 B8 4A 08 B9 AA 14 51  50 B8 52 08 B9 AA 14 51   ..J....Q P.R....Q
AEC0:  50 9A FC 00 89 08 83 C4  08 3D 00 00 75 03 E9 67   P....... .=..u..g
AED0:  00 C4 5E 0A 26 FF 07 C4  5E 0E 26 FF 07 8E 06 42   ..^.&... ^.&....B
AEE0:  0B 8B 5E EE D1 E3 D1 E3  26 C7 87 20 CB 01 00 8E   ..^..... &.. ....
AEF0:  06 46 0B 8B 5E F2 D1 E3  D1 E3 26 C7 87 FE C7 01   .F..^... ..&.....
AF00:  00 FF 76 FC 9A 32 2C AF  0D 83 C4 02 99 8E 06 4C   ..v..2,. .......L
AF10:  0B 26 01 06 3E C9 26 11  16 40 C9 FF 76 F8 9A 32   .&..>.&. .@..v..2
AF20:  2C AF 0D 83 C4 02 99 8E  06 4E 0B 26 01 06 74 C9   ,....... .N.&..t.
AF30:  26 11 16 76 C9 E9 68 01  E9 62 01 B8 1A 00 F7 6E   &..v..h. .b.....n
AF40:  FE 8B D8 8E 06 3E 0B 26  F6 87 24 04 08 74 03 E9   .....>.& ..$..t..
```

```
AF50:  D6 00 B8 1A 00 F7 6E FA  8B D8 8E 06 3C 0B 26 F6   ......n. ....<.&.
AF60:  87 92 0C 08 74 03 E9 BF  00 B8 1A 00 F7 6E FE 8B   ....t... .....n..
AF70:  D8 8E 06 3E 0B 26 8B 87  18 04 8B C8 B8 1A 00 F7   ...>.&.. ........
AF80:  6E FE 8B D8 26 3B 8F 1E  04 7C 03 E9 05 00 26 8B   n...&;.. .|....&.
AF90:  8F 1E 04 B8 1A 00 F7 6E  FE 8B D8 26 3B 8F 12 04   .......n ...&;...
AFA0:  7C 03 E9 05 00 26 8B 8F  12 04 89 4E F4 8B 46 F4   |....&.. ...N..F.
AFB0:  2B 46 F0 50 9A 32 2C AF  0D 83 C4 02 3D 12 00 7C   +F.P.2,. ....=..|
AFC0:  03 E9 61 00 C4 5E 0A 26  FF 07 8E 06 42 0B 8B 5E   ..a..^.& ....B..^
AFD0:  EE D1 E3 D1 E3 26 C7 87  20 CB 01 00 8E 06 46 0B   .....&..  .....F.
AFE0:  8B 5E F2 D1 E3 D1 E3 26  C7 87 FE C7 01 00 FF 76   .^.....& .......v
AFF0:  FC 9A 32 2C AF 0D 83 C4  02 99 8E 06 4C 0B 26 01   ..2,.... ....L.&.
B000:  06 3E C9 26 11 16 40 C9  FF 76 F8 9A 32 2C AF 0D   .>.&..@. .v..2,..
B010:  83 C4 02 99 8E 06 4E 0B  26 01 06 74 C9 26 11 16   ......N. &..t.&..
B020:  76 C9 E9 7B 00 E9 75 00  B8 1A 00 F7 6E FA 8B D8   v..{..u. ....n...
B030:  8E 06 3C 0B 26 8B 87 80  0C 2B 46 F4 50 9A 32 2C   ..<.&... .+F.P.2,
B040:  AF 0D 83 C4 02 3D 12 00  7D 03 E9 4A 00 B8 1A 00   .....=.. }..J....
B050:  F7 6E FA 8B D8 8E 06 3C  0B 26 8B 87 86 0C 2B 46   .n.....< .&....+F
B060:  F4 50 9A 32 2C AF 0D 83  C4 02 3D 12 00 7D 03 E9   .P.2,... ..=..}..
B070:  25 00 B8 1A 00 F7 6E FA  8B D8 8E 06 3C 0B 26 8B   %.....n. ....<.&.
B080:  87 8C 0C 2B 46 F4 50 9A  32 2C AF 0D 83 C4 02 3D   ...+F.P. 2,.....=
B090:  12 00 7C 03 E9 06 00 8B  46 F2 89 46 F6 E9 AE FC   ..|..... F..F....
B0A0:  8E 06 42 0B 8B 5E EE D1  E3 D1 E3 26 83 BF 20 CB   ..B..^.. ...&.. .
B0B0:  00 74 03 E9 C4 00 83 7E  F6 00 7F 03 E9 BB 00 C4   .t.....~ ........
B0C0:  5E 0A 26 FF 07 8B 46 F6  89 46 F2 8E 06 46 0B 8B   ^.&...F. .F...F..
B0D0:  5E F2 D1 E3 D1 E3 26 8B  87 FC C7 89 46 FE 8E 06   ^.....&. ....F...
B0E0:  42 0B 8B 5E EE D1 E3 D1  E3 26 C7 87 20 CB 01 00   B..^.... .&.. ...
B0F0:  8E 06 46 0B 8B 5E F2 D1  E3 D1 E3 26 C7 87 FE C7   ..F..^.. ...&....
B100:  01 00 B8 1A 00 F7 6E FE  8B D8 8E 06 3E 0B 26 8B   ......n. ....>.&.
B110:  87 0C 04 8B C8 B8 1A 00  F7 6E FA 8B D8 8E 06 3C   ........ .n.....<
B120:  0B 26 2B 8F 7A 0C 51 9A  32 2C AF 0D 83 C4 02 99   .&+.z.Q. 2,......
B130:  8E 06 4C 0B 26 01 06 3E  C9 26 11 16 40 C9 B8 1A   ..L.&..> .&..@...
B140:  00 F7 6E FE 8B D8 8E 06  3E 0B 26 8B 87 0E 04 8B   ..n..... >.&.....
B150:  C8 B8 1A 00 F7 6E FA 8B  D8 8E 06 3C 0B 26 2B 8F   .....n.. ...<.&+.
B160:  7C 0C 51 9A 32 2C AF 0D  83 C4 02 99 8E 06 4E 0B   |.Q.2,.. ......N.
B170:  26 01 06 74 C9 26 11 16  76 C9 E9 04 FB 5E 5F 8B   &..t.&.. v....^_.
B180:  E5 5D CB 55 8B EC 81 EC  22 00 57 56 B8 00 00 8E   .].U.... ".WV....
B190:  06 50 0B 26 A3 2A 08 8E  06 52 0B 26 A3 EA E9 B8   .P.&.*.. .R.&....
B1A0:  00 00 8E 06 54 0B 26 A3  6A EB 26 A3 68 EB B8 00   ....T.&. j.&.h...
B1B0:  00 BA 00 00 8E 06 4E 0B  26 A3 74 C9 26 89 16 76   ......N. &.t.&..v
B1C0:  C9 8E 06 4C 0B 26 A3 3E  C9 26 89 16 40 C9 C7 46   ...L.&.> .&..@..F
B1D0:  FA 02 00 C7 46 F8 03 00  8D 46 F4 16 50 8D 4E F6   ....F... .F..P.N.
B1E0:  16 51 9A FD 05 5B 0C 83  C4 08 8B 46 F6 99 F7 7E   .Q...[.. ...F...~
B1F0:  FA 89 46 F2 8B 46 F4 99  F7 7E F8 89 46 F0 C7 46   ..F..F.. .~..F..F
B200:  EA 00 00 C7 46 EC 00 00  8B 46 F2 89 46 E2 8B 46   ....F... .F..F..F
B210:  F0 89 46 E4 C7 46 E0 00  00 C7 46 E8 01 00 E9 03   ..F..F.. ..F.....
B220:  00 FF 46 E8 83 7E E8 02  7E 03 E9 1B 01 C7 46 E6   ..F..~.. ~.....F.
B230:  01 00 E9 03 00 FF 46 E6  83 7E E6 03 7E 03 E9 ED   ......F. .~..~...
B240:  00 FF 76 E4 FF 76 E2 FF  76 EC FF 76 EA B8 FC C7   ..v..v.. v..v....
B250:  B9 AA 14 51 50 8E 06 3E  0B 26 FF 36 02 00 B8 64   ...QP..> .&.6...d
B260:  9C 06 50 B8 0C 04 06 50  9A 4A 08 DE 09 83 C4 16   ..P....P .J......
B270:  89 46 DE FF 76 E4 FF 76  E2 FF 76 EC FF 76 EA B8   .F..v..v ..v..v..
B280:  1E CB B9 AA 14 51 50 8E  06 3C 0B 26 FF 36 70 08   .....QP. .<.&.6p.
B290:  B8 D2 A4 06 50 B8 7A 0C  06 50 9A 4A 08 DE 09 83   ....P.z. .P.J....
```

```
B2A0:  C4 16 89 46 FC 8D 46 EE  16 50 8D 4E FE 16 51 FF   ...F..F. .P.N..Q.
B2B0:  76 FC FF 76 DE 9A 81 0C  DE 09 83 C4 0C 8B 46 FE   v..v.... ......F.
B2C0:  8E 06 56 0B 8B 5E E0 D1  E3 26 89 87 76 D1 8B 46   ..V..^.. .&..v..F
B2D0:  FC 8E 06 58 0B 8B 5E E0  D1 E3 26 89 87 1E 08 8B   ...X..^. ..&.....
B2E0:  46 DE 8E 06 5A 0B 8B 5E  E0 D1 E3 26 89 87 36 00   F...Z..^ ...&..6.
B2F0:  FF 46 E0 8B 46 F0 01 46  EC 8B 46 F0 01 46 E4 8B   .F..F..F ..F..F..
B300:  46 FE 8E 06 54 0B 26 01  06 6A EB 8B 46 EE 26 01   F...T.&. .j..F.&.
B310:  06 68 EB 8B 46 FC 8E 06  50 0B 26 01 06 2A 08 8B   .h..F... P.&..*..
B320:  46 DE 8E 06 52 0B 26 01  06 EA E9 E9 07 FF C7 46   F...R.&. .......F
B330:  EC 00 00 8B 46 F0 89 46  E4 8B 46 F2 01 46 EA 8B   ....F..F ..F..F..
B340:  46 F2 01 46 E2 E9 D9 FE  5E 5F 8B E5 5D CB 55 8B   F..F.... ^_..].U.
B350:  EC 81 EC 00 00 57 56 8B  46 06 8E 06 5C 0B 26 A3   .....WV. F...\.&.
B360:  50 08 5E 5F 8B E5 5D CB  55 8B EC 81 EC 68 00 57   P.^_..]. U....h.W
B370:  56 B8 E8 03 1E 50 B8 EB  03 1E 50 9A 34 07 AF 0D   V....P.. ..P.4...
B380:  83 C4 08 89 46 FC 89 56  FE 0B D0 75 03 E9 3C 00   ....F..V ...u..<.
B390:  FF 76 FE FF 76 FC B8 64  00 50 8D 46 98 16 50 9A   .v..v..d .P.F..P.
B3A0:  1C 28 AF 0D 83 C4 0A B8  E6 03 1E 50 B8 F6 03 1E   .(...... ...P....
B3B0:  50 8D 46 98 16 50 9A 02  29 AF 0D 83 C4 0C FF 76   P.F..P.. )......v
B3C0:  FE FF 76 FC 9A 3A 06 AF  0D 83 C4 04 5E 5F 8B E5   ..v..:.. ...._-._
B3D0:  5D CB 55 8B EC 81 EC 00  00 57 56 83 7E 06 06 7E   ].U..... .WV.-..~
B3E0:  03 E9 18 00 8E 06 5C 0B  26 83 3E 50 08 01 74 03   ......\. &.>P..t.
B3F0:  E9 12 00 83 7E 06 05 7F  03 E9 09 00 B8 01 00 E9   ........ ........
B400:  09 00 E9 06 00 B8 00 00  E9 00 00 5E 5F 8B E5 5D   ........ ...^_..]
B410:  CB 55 8B EC 81 EC 00 00  57 56 9A 8B 0B 14 0B B8   .U...... WV......
B420:  00 00 E9 81 00 8E 06 5C  0B 26 83 3E 50 08 01 75   .......\ .&.>P..u
B430:  03 E9 72 00 B8 E8 03 BA  00 00 52 50 B8 17 0B BA   ..r..... ..RP....
B440:  00 00 52 50 8E 06 5E 0B  26 FF 36 94 BF 26 FF 36   ..RP..^. &.6..&.6
B450:  92 BF 9A 5E 2D AF 0D B9  2F 13 BB 00 00 53 51 8E   ...^-... /....SQ.
B460:  06 5E 0B 26 FF 36 AC BF  26 FF 36 AA BF 8B F0 8B   .^.&.6.. &.6.....
B470:  FA 9A 5E 2D AF 0D 03 F0  13 FA 81 EE 50 3F 83 DF   ..^-.... ....P?..
B480:  16 57 56 9A C4 2C AF 0D  8E 06 60 0B 26 A3 6E EB   .WV..,.. ..`.&.n.
B490:  26 81 3E 6E EB A4 06 7F  03 E9 0A 00 B8 FF FF 26   &.>n.... .......&
B4A0:  A3 76 EB E9 00 00 5E 5F  8B E5 5D CB 55 8B EC 81   .v....^_ ..].U...
B4B0:  EC 0C 00 57 56 9A 2B 0F  14 0B 8E 06 60 0B 26 83   ...WV.+. ....`.&.
B4C0:  3E 50 EB 01 7C 03 E9 0D  00 26 C7 06 76 EB FF FF   >P..|... .&..v...
B4D0:  B8 FF FF E9 00 03 B8 E8  03 BA 00 00 52 50 B8 20   ........ ....RP.
B4E0:  12 BA 00 00 52 50 8E 06  5E 0B 26 FF 36 D0 BF 26   ....RP.. ^.&.6..&
B4F0:  FF 36 CE BF 9A 5E 2D AF  0D B9 26 11 BB 00 00 53   .6...^-. ..&....S
B500:  51 8E 06 5E 0B 26 FF 36  CC BF 26 FF 36 CA BF 8B   Q..^.&.6 ..&.6...
B510:  F0 8B FA 9A 5E 2D AF 0D  B9 DD FA BB 01 00 53 51   ....^-.. ......SQ
B520:  8E 06 60 0B 8B C8 26 A1  44 EB 8B DA 99 52 50 89   ..`...&. D....RP.
B530:  4E F4 89 5E F6 9A 5E 2D  AF 0D 03 46 F4 13 56 F6   N..^..^- ...F..V.
B540:  03 F0 13 FA 81 EE 05 16  83 DF 33 57 56 9A C4 2C   ........ ..3WV..,
B550:  AF 0D 8E 06 60 0B 26 A3  6E EB 8E 06 5C 0B 26 83   ....`.&. n...\.&.
B560:  3E 50 08 01 74 03 E9 62  00 8E 06 60 0B 26 83 3E   >P..t..b ...`.&.>
B570:  76 EB 00 74 03 E9 2A 00  26 81 3E 6E EB 38 FF 7F   v..t..*. &.>n.8..
B580:  03 E9 07 00 26 C7 06 76  EB 01 00 8E 06 60 0B 26   ....&..v .....`.&
B590:  81 3E 6E EB 5C F9 7C 03  E9 07 00 26 C7 06 76 EB   .>n.\.|. ...&..v.
B5A0:  FF FF 8E 06 60 0B 26 A1  50 EB 26 A3 6C EB 26 83   ....`.&. P.&.l.&.
B5B0:  3E 6C EB 01 7C 03 E9 09  00 B8 FF FF E9 17 02 E9   >l..|... ........
B5C0:  06 00 B8 00 00 E9 0E 02  E9 00 02 8E 06 60 0B 26   ........ .....`.&
B5D0:  A1 6E EB 8E 06 62 0B 26  2B 06 78 08 8E 06 5E 0B   .n...b.& +.x...^.
E5E0:  26 A3 00 C0 8E 06 62 0B  26 A1 78 08 05 88 13 99   &.....b. &.x.....
```

B_ENROLL.DMP    Tuesday, July 13, 1993 1:12 pm    Page 56

```
B5F0:  52 50 8E 06 5E 0B B8 E8  03 26 F7 2E 00 C0 52 50   RP..^... .&....RP
B600:  9A C4 2C AF 0D 99 89 46  FC 89 56 FE 8E 06 62 0B   ..,....F ..V...b.
B610:  26 A1 78 08 05 88 13 99  52 50 8E 06 5E 0B 26 FF   &.x..... RP..^.&.
B620:  36 00 C0 9A 32 2C AF 0D  83 C4 02 B9 E8 03 F7 E9   6...2,.. ........
B630:  52 50 9A C4 2C AF 0D 99  89 46 F8 89 56 FA 8E 06   RP..,... .F..V...
B640:  62 0B 26 83 3E 84 08 00  74 03 E9 0F 00 8E 06 5E   b.&.>... t......^
B650:  0B 26 A1 00 C0 26 A3 0C  C0 E9 31 00 8E 06 62 0B   .&...&.. ..1...b.
B660:  26 A1 84 08 3D 01 00 7C  03 E9 03 00 B8 01 00 99   &...=..| ........
B670:  52 50 8E 06 5E 0B B8 E8  03 26 F7 2E 00 C0 52 50   RP..^... .&....RP
B680:  9A C4 2C AF 0D 8E 06 5E  0B 26 A3 0C C0 B8 E8 03   ..,....^ .&......
B690:  BA 00 00 52 50 B8 0A 0F  BA 00 00 52 50 8E 06 5E   ...RP... ...RP..^
B6A0:  0B 26 FF 36 D0 BF 26 FF  36 CE BF 9A 5E 2D AF 0D   .&.6..&. 6...^-..
B6B0:  B9 22 4B BB 02 00 53 51  8E 06 60 0B 8B C8 26 A1   ."K...SQ ..`...&.
B6C0:  4E EB 8B DA 99 52 50 8B  F1 8B FB 9A 5E 2D AF 0D   N....RP. ....^-..
B6D0:  03 F0 13 FA 81 EE 0E 66  83 DF 2A 57 56 9A C4 2C   .......f ..*WV..,
B6E0:  AF 0D 8E 06 60 0B 26 A3  6E EB 26 83 3E 6E EB 64   ....`.&. n.&.>n.d
B6F0:  7F 03 E9 07 00 26 C7 06  76 EB 01 00 8E 06 60 0B   .....&.. v.....`.
B700:  26 81 3E 6E EB F8 F8 7C  03 E9 07 00 26 C7 06 76   &.>n...| ....&..v
B710:  EB FF FF 8E 06 60 0B 26  A1 76 EB E9 B8 00 8E 06   .....`.& .v......
B720:  60 0B 26 83 3E 76 EB 00  74 03 E9 9E 00 B8 E8 03   `.&.>v.. t.......
B730:  BA 00 00 52 50 B8 D3 05  BA 00 00 52 50 FF 76 FE   ...RP... ...RP.v.
B740:  FF 76 FC 9A 5E 2D AF 0D  B9 06 10 BB 00 00 53 51   .v..^-.. ......SQ
B750:  FF 76 FA FF 76 F8 8B F0  8B FA 9A 5E 2D AF 0D B9   .v..v... ...^-...
B760:  26 EA BB 00 00 53 51 8E  06 60 0B 8B C8 26 A1 4A   &....SQ. .`...&.J
B770:  EB 8B DA 99 52 50 89 4E  F4 89 5E F6 9A 5E 2D AF   ....RP.N ..^..^-.
B780:  0D 2B 46 F4 1B 56 F6 03  F0 13 FA 81 EE DE 2F 83   .+F..V.. ....../.
B790:  DF 00 57 56 9A C4 2C AF  0D 8E 06 60 0B 26 A3 6E   ..WV..,. ...`.&.n
B7A0:  EB 26 81 3E 6E EB AA 05  7F 03 E9 07 00 26 C7 06   .&.>n... .....&..
B7B0:  76 EB 01 00 8E 06 60 0B  26 81 3E 6E EB 24 FA 7C   v.....`. &.>n.$.|
B7C0:  03 E9 07 00 26 C7 06 76  EB FF FF 8E 06 60 0B 26   ....&..v .....`.&
B7D0:  A1 76 EB E9 00 00 5E 5F  8B E5 5D CB 55 8B EC 81   .v....^_ ..].U...
B7E0:  EC 08 00 57 56 9A F2 0F  14 0B B8 E8 03 BA 00 00   ...WV... ........
B7F0:  52 50 B8 54 CC BA 00 00  52 50 8E 06 5E 0B 26 FF   RP.T.... RP..^.&.
B800:  36 E8 BF 26 FF 36 E6 BF  9A 5E 2D AF 0D B9 BC F1   6..&.6.. .^-.....
B810:  BB 0B 00 53 51 8E 06 60  0B 8B C8 26 A1 58 EB 8B   ...SQ..` ...&.X..
B820:  DA 99 52 50 8B F1 8B FB  9A 5E 2D AF 0D 03 F0 13   ..RP.... .^-.....
B830:  FA 81 EE 9D 49 83 DF 0C  57 56 9A C4 2C AF 0D 8E   ....I... WV..,...
B840:  06 60 0B 26 A3 70 EB 8E  06 5C 0B 26 83 3E 50 08   .`.&.p.. .\.&.>P.
B850:  01 74 03 E9 25 00 8E 06  60 0B 26 83 3E 76 EB 00   .t..%... `.&.>v..
B860:  74 03 E9 13 00 26 81 3E  70 EB 08 07 7F 03 E9 07   t....&.> p.......
B870:  00 26 C7 06 76 EB 02 00  E9 D6 00 8E 06 60 0B 26   .&..v... .....`.&
B880:  A1 70 EB 8E 06 62 0B 26  2B 06 7A 08 8E 06 5E 0B   .p...b.& +.z...^.
B890:  26 A3 02 C0 8E 06 62 0B  26 83 3E 86 08 00 74 03   &.....b. &.>...t.
B8A0:  E9 0F 00 8E 06 5E 0B 26  A1 02 C0 26 A3 0E C0 E9   .....^.& ...&....
B8B0:  31 00 8E 06 62 0B 26 A1  86 08 3D 01 00 7C 03 E9   1...b.&. ..=..|..
B8C0:  03 00 B8 01 00 99 52 50  8E 06 5E 0B B8 E8 03 26   ......RP ..^....&
B8D0:  F7 2E 02 C0 52 50 9A C4  2C AF 0D 8E 06 5E 0B 26   ....RP.. ,....^.&
B8E0:  A3 0E C0 B8 E8 03 BA 00  00 52 50 B8 B5 BC BA 0E   ........ .RP.....
B8F0:  00 52 50 8E 06 60 0B 26  A1 60 EB 99 52 50 9A 5E   .RP..`.& .`..RP.^
B900:  2D AF 0D B9 2F 7C BB 07  00 53 51 8E 06 60 0B 8B   -.../|.. .SQ..`..
B910:  C8 26 A1 56 EB 8B DA 99  52 50 8B F1 8B FB 9A 5E   .&.V.... RP.....^
B920:  2D AF 0D 8E 06 5E 0B 8B  C8 B8 FB 00 8B DA 26 F7   -....^.. ......&.
B930:  2E 02 C0 03 C1 13 D3 03  F0 13 FA 81 C6 D2 92 83   ........ ........
```

```
B940:  D7 0C 57 56 9A C4 2C AF  0D 8E 06 60 0B 26 A3 70   ..WV..,. ...`.&.p
B950:  EB B8 E8 03 BA 00 00 52  50 B8 E6 1B BA 00 00 52   .......R P......R
B960:  50 8E 06 5E 0B 26 FF 36  D0 BF 26 FF 36 CE BF 9A   P..^.&.6 ..&.6...
B970:  5E 2D AF 0D B9 A5 A4 BB  02 00 53 51 8E 06 60 0B   ^-...... ..SQ..`.
B980:  8B C8 26 A1 66 EB 8B DA  99 52 50 8B F1 8B FB 9A   ..&.f... .RP.....
B990:  5E 2D AF 0D 03 F0 13 FA  81 EE 0C 33 83 DF 30 57   ^-...... ...3..0W
B9A0:  56 9A C4 2C AF 0D 8E 06  60 0B 26 A3 72 EB 8E 06   V..,.... `.&.r...
B9B0:  5C 0B 26 83 3E 50 08 01  74 03 E9 04 01 8E 06 60   \.&.>P.. t......`
B9C0:  0B 26 83 3E 76 EB 00 74  03 E9 2A 00 26 81 3E 72   .&.>v..t ..*.&.>r
B9D0:  EB DC 05 7F 03 E9 07 00  26 C7 06 76 EB 03 00 8E   ........ &..v....
B9E0:  06 60 0B 26 81 3E 72 EB  E0 FC 7E 03 E9 07 00 26   .`.&.>r. ..~....&
E9F0:  C7 06 76 EB FD FF B8 E8  03 BA 00 00 52 50 B8 2D   ..v..... ....RP.-
BA00:  0A BA 00 00 52 50 8E 06  5E 0B 26 FF 36 D0 BF 26   ....RP.. ^.&.6..&
BA10:  FF 36 CE BF 9A 5E 2D AF  0D B9 1F 0E BB 01 00 53   .6...^-. .......S
BA20:  51 8E 06 60 0B 8B C8 26  A1 44 EB 8B DA 99 52 50   Q..`...& .D....RP
BA30:  8B F1 8B FB 9A 5E 2D AF  0D B9 14 B4 BB 00 00 53   .....^-. .......S
BA40:  51 8E 06 60 0B 8B C8 26  A1 56 EB 8B DA 99 52 50   Q..`...& .V....RP
BA50:  89 4E FC 89 5E FE 9A 5E  2D AF 0D B9 86 F7 BB 00   .N..^..^ -.......
BA60:  00 53 51 8E 06 60 0B 8B  C8 26 A1 54 EB 8B DA 99   .SQ..`.. .&.T....
BA70:  52 50 89 4E F8 89 5E FA  9A 5E 2D AF 0D 03 46 F8   RP.N..^. .^-...F.
BA80:  13 56 FA 03 46 FC 13 56  FE 03 F0 13 FA 81 EE 98   .V..F..V ........
BA90:  8B 83 DF 22 57 56 9A C4  2C AF 0D 8E 06 60 0B 26   ..."WV.. ,....`.&
BAA0:  A3 6C EB 26 81 3E 6C EB  0C FE 7F 03 E9 09 00 B8   .l.&.>l. ........
BAB0:  03 00 E9 39 01 E9 06 00  B8 FD FF E9 30 01 E9 2D   ...9.... ....0..-
BAC0:  01 8E 06 60 0B 26 A1 72  EB 8E 06 62 0B 26 2B 06   ...`.&.r ...b.&+.
BAD0:  7C 08 8E 06 5E 0B 26 A3  04 C0 8E 06 62 0B 26 83   |...^.&. ....b.&.
BAE0:  3E 88 08 00 74 03 E9 0F  00 8E 06 5E 0B 26 A1 04   >...t... ...^.&..
BAF0:  C0 26 A3 10 C0 E9 31 00  8E 06 62 0B 26 A1 86 08   .&....1. ..b.&...
BB00:  3D 01 00 7C 03 E9 03 00  B8 01 00 99 52 50 8E 06   =..|.... ....RP..
EB10:  5E 0B B8 E8 03 26 F7 2E  04 C0 52 50 9A C4 2C AF   ^....&.. ..RP..,.
BB20:  0D 8E 06 5E 0B 26 A3 10  C0 B8 E8 03 BA 00 00 52   ...^.&.. .......R
BB30:  50 B8 61 32 BA 00 00 52  50 8E 06 5E 0B 26 FF 36   P.a2...R P..^.&.6
BB40:  E4 BF 26 FF 36 E2 BF 9A  5E 2D AF 0D B9 F2 22 BB   ..&.6... ^-....".
BB50:  03 00 53 51 8E 06 60 0B  8B C8 26 A1 56 EB 8B DA   ..SQ..`. ..&.V...
BB60:  99 52 50 8B F1 8B FB 9A  5E 2D AF 0D B9 36 40 BB   .RP..... ^-...6@.
BB70:  02 00 53 51 8E 06 60 0B  8B C8 26 A1 4E EB 8B DA   ..SQ..`. ..&.N...
BB80:  99 52 50 89 4E F8 89 5E  FA 9A 5E 2D AF 0D 03 46   .RP.N..^ ..^-...F
BB90:  F8 13 56 FA 03 F0 13 FA  81 EE 33 34 83 DF 20 57   ..V..... ..34.. W
BBA0:  56 9A C4 2C AF 0D 8E 06  60 0B 26 A3 72 EB 26 83   V..,.... `.&.r.&.
BBB0:  3E 76 EB 00 74 03 E9 2A  00 26 81 3E 72 EB B0 04   >v..t..* .&.>r...
BBC0:  7F 03 E9 07 00 26 C7 06  76 EB 03 00 8E 06 60 0B   .....&.. v.....`.
BBD0:  26 81 3E 72 EB 50 FB 7E  03 E9 07 00 26 C7 06 76   &.>r.P.~ ....&..v
BBE0:  EB FD FF 8E 06 60 0B 26  A1 76 EB E9 00 00 5E 5F   .....`.& .v....^_
BBF0:  8B E5 5D CB 55 8B EC 81  EC 14 00 57 56 9A 4F 11   ..].U... ...WV.O.
BC00:  14 0B B8 E8 03 BA 00 00  52 50 B8 09 20 BA 00 00   ........ RP.. ...
BC10:  52 50 8E 06 5E 0B 26 FF  36 D4 BF 26 FF 36 D2 BF   RP..^.&. 6..&.6..
BC20:  9A 5E 2D AF 0D B9 08 46  BB 02 00 53 51 8E 06 5E   .^-....F ...SQ..^
BC30:  0B 26 FF 36 F4 BF 26 FF  36 F2 BF 8B F0 8B FA 9A   .&.6..&. 6.......
BC40:  5E 2D AF 0D B9 F0 99 BB  02 00 53 51 8E 06 60 0B   ^-...... ..SQ..`.
BC50:  8B C8 26 A1 54 EB 8B DA  99 52 50 89 4E F0 89 5E   ..&.T... .RP.N..^
BC60:  F2 9A 5E 2D AF 0D B9 C4  23 BB 00 00 53 51 8E 06   ..^-.... #...SQ..
BC70:  5E 0B 26 FF 36 D0 BF 26  FF 36 CE BF 89 46 EC 89   ^.&.6..& .6...F..
BC80:  56 EE 9A 5E 2D AF 0D 03  46 EC 13 56 EE 03 46 F0   V..^-... F..V..F.
```

```
BC90:  13 56 F2 03 F0 13 FA 81  EE AA 4E 83 DF 55 57 56   .V...... ..N..UWV
BCA0:  9A C4 2C AF 0D 8E 06 60  0B 26 A3 74 EB 8E 06 5C   ..,....` .&.t...\
BCB0:  0B 26 83 3E 50 08 01 74  03 E9 33 00 8E 06 60 0B   .&.>P..t ..3...`.
BCC0:  26 83 3E 76 EB 00 74 03  E9 21 00 26 81 3E 74 EB   &.>v..t. .!.&.>t.
BCD0:  08 07 7F 03 E9 0A 00 26  C7 06 76 EB 04 00 E9 0B   .......& ..v.....
BCE0:  00 8E 06 60 0B 26 C7 06  76 EB FC FF E9 CB 01 8E   ...`.&.. v.......
BCF0:  06 60 0B 26 A1 74 EB 8E  06 62 0B 26 2B 06 7E 08   .`.&.t.. .b.&+.~.
BD00:  8E 06 5E 0B 26 A3 06 C0  8E 06 62 0B 26 A1 7C 08   ..^.&... ..b.&.|.
BD10:  05 88 13 99 52 50 8E 06  5E 0B 26 FF 36 04 C0 9A   ....RP.. ^.&.6...
BD20:  32 2C AF 0D 83 C4 02 B9  E8 03 F7 E9 52 50 9A C4   2,...... ....RP..
BD30:  2C AF 0D 99 89 46 F8 89  56 FA 8E 06 62 0B 26 A1   ,....F.. V...b.&.
BD40:  70 08 8E 06 64 0B 26 2B  06 32 08 99 52 50 B8 E8   p...d.&+ .2..RP..
BD50:  03 BA 00 00 52 50 8E 06  5E 0B 26 FF 36 D4 BF 26   ....RP.. ^.&.6..&
BD60:  FF 36 D2 BF 9A 5E 2D AF  0D 52 50 9A C4 2C AF 0D   .6...^-. .RP..,..
BD70:  89 46 FC 89 56 FE 8E 06  62 0B 26 83 3E 8A 08 00   .F..V... b.&.>...
BD80:  74 03 E9 0F 00 8E 06 5E  0B 26 A1 06 C0 26 A3 12   t......^ .&...&..
BD90:  C0 E9 31 00 8E 06 62 0B  26 A1 8A 08 3D 01 00 7C   ..1...b. &...=..|
BDA0:  03 E9 03 00 B8 01 00 99  52 50 8E 06 5E 0B B8 E8   ........ RP..^...
BDB0:  03 26 F7 2E 06 C0 52 50  9A C4 2C AF 0D 8E 06 5E   .&....RP ..,....^
BDC0:  0B 26 A3 12 C0 B8 E8 03  BA 00 00 52 50 B8 7E 01   .&...... ...RP.~.
BDD0:  BA 00 00 52 50 FF 76 FE  FF 76 FC 9A 5E 2D AF 0D   ...RP.v. .v..^-..
BDE0:  B9 77 12 BB 00 00 53 51  FF 76 FA FF 76 F8 8B F0   .w....SQ .v..v...
BDF0:  8B FA 9A 5E 2D AF 0D B9  F8 0E BB 00 00 53 51 8E   ...^-... .....SQ.
BE00:  06 5E 0B 26 FF 36 D4 BF  26 FF 36 D2 BF 89 46 EC   .^.&.6.. &.6...F.
BE10:  89 56 EE 9A 5E 2D AF 0D  B9 B6 F1 BB 03 00 53 51   .V..^-.. ......SQ
BE20:  8E 06 60 0B 8B C8 26 A1  44 EB 8B DA 99 52 50 89   ..`...&. D....RP.
BE30:  4E F0 89 5E F2 9A 5E 2D  AF 0D 8E 06 60 0B 8B C8   N..^..^- ....`...
BE40:  B8 93 7E 8B DA 26 F7 2E  4A EB 03 C8 13 DA 03 4E   ..~..&.. J......N
BE50:  F0 13 5E F2 2B 4E EC 1B  5E EE 03 F1 13 FB 81 C6   ..^.+N.. ^.......
BE60:  B7 29 83 D7 0A 57 56 9A  C4 2C AF 0D 8E 06 60 0B   .)...WV. .,....`.
BE70:  26 A3 74 EB 26 83 3E 76  EB 00 74 03 E9 22 00 A1   &.t.&.>v ..t.."..
BE80:  E6 03 26 39 06 74 EB 7F  03 E9 0A 00 26 C7 06 76   ..&9.t.. ....&..v
BE90:  EB 04 00 E9 0B 00 8E 06  60 0B 26 C7 06 76 EB FC   ........ `.&..v..
BEA0:  FF 8E 06 60 0B 26 A1 76  EB 8E 06 62 0B 26 2B 06   ...`.&.v ...b.&+.
BEB0:  80 08 8E 06 5E 0B 26 A3  08 C0 8E 06 60 0B 26 A1   ....^.&. ....`.&.
BEC0:  76 EB E9 00 00 5E 5F 8B  E5 5D CB 55 8B EC 81 EC   v....^_. .].U....
BED0:  00 00 57 56 8E 06 66 0B  26 A1 02 00 26 2B 06 00   ..WV..f. &...&+..
BEE0:  00 8E 06 68 0B 26 A3 F6  E9 8E 06 62 0B 26 A1 70   ...h.&.. ...b.&.p
BEF0:  08 26 2B 06 6E 08 8E 06  64 0B 26 A3 36 08 8E 06   .&+.n... d.&.6...
BF00:  68 0B 26 A1 EC E9 26 8B  0E F6 E9 83 F9 01 7C 03   h.&...&. ......|.
BF10:  E9 03 00 B9 01 00 99 F7  F9 26 A3 F4 E9 8E 06 64   ........ .&.....d
BF20:  0B 26 A1 2C 08 26 8B 0E  36 08 83 F9 01 7C 03 E9   .&.,.&.. 6....|..
BF30:  03 00 B9 01 00 99 F7 F9  26 A3 34 08 B8 FF FF BA   ........ &.4.....
BF40:  FF FF 8E 06 5E 0B 26 A3  C2 BF 26 89 16 C4 BF 26   ....^.&. ..&....&
BF50:  A3 BA BF 26 89 16 BC BF  B8 FF FF BA FF FF 26 A3   ...&.... ......&.
BF60:  C6 BF 26 89 16 C8 BF 26  A3 BE BF 26 89 16 C0 BF   ..&....& ...&....
BF70:  8E 06 62 0B 26 A1 70 08  8E 06 66 0B 26 03 06 02   ..b.&.p. ..f.&...
BF80:  00 99 52 50 26 A1 02 00  8E 06 62 0B 26 2B 06 70   ..RP&... ..b.&+.p
BF90:  08 50 9A 32 2C AF 0D 83  C4 02 B9 D0 07 F7 E9 52   .P.2,... .......R
BFA0:  50 9A C4 2C AF 0D 8E 06  5E 0B 26 A3 8E BF 26 89   P..,.... ^.&...&.
BFB0:  16 90 BF 8E 06 62 0B 26  A1 6E 08 8E 06 66 0B 26   .....b.& .n...f.&
BFC0:  03 06 00 00 99 52 50 26  A1 00 00 8E 06 62 0B 26   .....RP& .....b.&
BFD0:  2B 06 6E 08 50 9A 32 2C  AF 0D 83 C4 02 B9 D0 07   +.n.P.2, ........
```

```
BFE0:  F7 E9 52 50 9A C4 2C AF  0D 8E 06 5E 0B 26 A3 92   ..RP..,. ...^.&..
BFF0:  BF 26 89 16 94 BF 8E 06  64 0B 26 A1 2C 08 8E 06   .&...... d.&.,...
C000:  68 0B 26 03 06 EC E9 50  9A 32 2C AF 0D 83 C4 02   h.&....P .2,.....
C010:  99 52 50 8E 06 68 0B 26  A1 EC E9 8C C1 8E 06 64   .RP..h.& .......d
C020:  0B 26 2B 06 2C 08 50 9A  32 2C AF 0D 83 C4 02 B9   .&+.,.P. 2,......
C030:  D0 07 F7 E9 52 50 9A C4  2C AF 0D 8E 06 5E 0B 26   ....RP.. ,....^.&
C040:  A3 96 BF 26 89 16 98 BF  8E 06 64 0B 26 A1 30 08   ...&.... ..d.&.0.
C050:  8E 06 68 0B 26 03 06 F0  E9 99 52 50 26 A1 F0 E9   ..h.&... ..RP&...
C060:  8E 06 64 0B 26 2B 06 30  08 50 9A 32 2C AF 0D 83   ..d.&+.0 .P.2,...
C070:  C4 02 B9 D0 07 F7 E9 52  50 9A C4 2C AF 0D 8E 06   .......R P..,....
C080:  5E 0B 26 A3 A2 BF 26 89  16 A4 BF 8E 06 64 0B 26   ^.&...&. .....d.&
C090:  A1 32 08 8E 06 68 0B 26  03 06 F2 E9 3D 01 00 7C   .2...h.& ....=..|
C0A0:  03 E9 03 00 B8 01 00 99  52 50 26 A1 F2 E9 8E 06   ........ RP&.....
C0B0:  64 0B 26 2B 06 32 08 50  9A 32 2C AF 0D 83 C4 02   d.&+.2.P .2,.....
C0C0:  B9 D0 07 F7 E9 52 50 9A  C4 2C AF 0D 8E 06 5E 0B   .....RP. .,....^.
C0D0:  26 A3 A6 BF 26 89 16 A8  BF 8E 06 64 0B 26 A1 2E   &...&... ...d.&..
C0E0:  08 8E 06 68 0B 26 03 06  EE E9 3D 01 00 7C 03 E9   ...h.&.. ..=..|..
C0F0:  03 00 B8 01 00 99 52 50  26 A1 EE E9 8E 06 64 0B   ......RP &.....d.
C100:  26 2B 06 2E 08 50 9A 32  2C AF 0D 83 C4 02 B9 D0   &+...P.2 ,.......
C110:  07 F7 E9 52 50 9A C4 2C  AF 0D 8E 06 5E 0B 26 A3   ...RP.., ....^.&.
C120:  9E BF 26 89 16 A0 BF 8E  06 64 0B 26 A1 34 08 8E   ..&..... .d.&.4..
C130:  06 68 0B 26 03 06 F4 E9  99 52 50 26 A1 F4 E9 8E   .h.&.... .RP&....
C140:  06 64 0B 26 2B 06 34 08  50 9A 32 2C AF 0D 83 C4   .d.&+.4. P.2,....
C150:  02 B9 D0 07 F7 E9 52 50  9A C4 2C AF 0D 8E 06 5E   ......RP ..,....^
C160:  0B 26 A3 AA BF 26 89 16  AC BF 8E 06 62 0B 26 A1   .&...&.. ....b.&.
C170:  72 08 8E 06 66 0B 26 03  06 04 00 3D 01 00 7C 03   r...f.&. ...=..|.
C180:  E9 03 00 B8 01 00 99 52  50 26 A1 04 00 8E 06 62   .......R P&.....b
C190:  0B 26 2B 06 72 08 50 9A  32 2C AF 0D 83 C4 02 B9   .&+.r.P. 2,......
C1A0:  D0 07 F7 E9 52 50 9A C4  2C AF 0D 8E 06 5E 0B 26   ....RP.. ,....^.&
C1B0:  A3 B2 BF 26 89 16 B4 BF  8E 06 62 0B 26 A1 72 08   ...&.... ..b.&.r.
C1C0:  8E 06 66 0B 26 03 06 04  00 3D 01 00 7C 03 E9 03   ..f.&... .=..|...
C1D0:  00 B8 01 00 99 52 50 26  A1 06 00 8E 06 62 0B 26   .....RP& .....b.&
C1E0:  2B 06 74 08 50 9A 32 2C  AF 0D 83 C4 02 B9 D0 07   +.t.P.2, ........
C1F0:  F7 E9 52 50 9A C4 2C AF  0D 8E 06 5E 0B 26 A3 B6   ..RP..,. ...^.&..
C200:  BF 26 89 16 B8 BF 8E 06  64 0B 26 A1 2C 08 99 52   .&...... d.&.,..R
C210:  50 8E 06 62 0B B8 E8 03  26 F7 2E 8E 08 52 50 9A   P..b.... &....RP.
C220:  C4 2C AF 0D 8E 06 68 0B  8B C8 26 A1 EC E9 8B DA   .,....h. ..&.....
C230:  99 52 50 8E 06 66 0B B8  E8 03 26 F7 2E 20 00 52   .RP..f.. ..&.. .R
C240:  50 8B F1 8B FB 9A C4 2C  AF 0D 2B C6 1B D7 52 50   P......, ..+...RP
C250:  9A 40 2C AF 0D 83 C4 04  8E 06 5E 0B 26 A3 DA BF   .@,..... ..^.&...
C260:  26 89 16 DC BF 5E 5F 8B  E5 5D CB 55 8B EC 81 EC   &....^_. .].U....
C270:  00 00 57 56 8E 06 66 0B  26 A1 02 00 26 2B 06 00   ..WV..f. &...&+..
C280:  00 8E 06 68 0B 26 A3 F6  E9 8E 06 62 0B 26 A1 70   ...h.&.. ...b.&.p
C290:  08 26 2B 06 6E 08 8E 06  64 0B 26 A3 36 08 8E 06   .&+.n... d.&.6...
C2A0:  60 0B 26 83 3E 48 EB 00  75 03 E9 63 00 26 A1 46   `.&.>H.. u..c.&.F
C2B0:  EB 3D 01 00 7C 03 E9 03  00 B8 01 00 99 52 50 B8   .=..|... .....RP.
C2C0:  D0 07 26 F7 2E 4E EB 52  50 9A C4 2C AF 0D 8E 06   ..&..N.R P..,....
C2D0:  5E 0B 26 A3 CA BF 26 89  16 CC BF 8E 06 60 0B 26   ^.&...&. .....`.&
C2E0:  A1 46 EB 3D 01 00 7C 03  E9 03 00 B8 01 00 99 52   .F.=..|. .......R
C2F0:  50 B8 E8 03 26 F7 2E 4A  EB 52 50 9A C4 2C AF 0D   P...&..J .RP..,..
C300:  8E 06 5E 0B 26 A3 CE BF  26 89 16 D0 BF E9 1C 00   ..^.&... &.......
C310:  B8 00 00 BA 00 00 8E 06  5E 0B 26 A3 CE BF 26 89   ........ ^.&...&.
C320:  16 D0 BF 26 A3 CA BF 26  89 16 CC BF 5E 5F 8B E5   ...&...& ....^_..
```

```
C330:  5D CB 55 8B EC 81 EC 00  00 57 56 8E 06 60 0B 26   ].U..... .WV..`.&
C340:  A1 5A EB 26 8B 0E 54 EB  83 F9 01 7C 03 E9 03 00   .Z.&..T. ...|....
C350:  B9 01 00 99 F7 F9 99 8E  06 5E 0B 26 A3 F6 BF 26   ........ .^.&...&
C360:  89 16 F8 BF 8E 06 60 0B  26 A1 5C EB 26 8B 0E 56   ......`. &.\.&..V
C370:  EB 83 F9 01 7C 03 E9 03  00 B9 01 00 99 F7 F9 99   ....|... ........
C380:  8E 06 5E 0B 26 A3 FA BF  26 89 16 FC BF 8E 06 64   ..^.&... &......d
C390:  0B 26 A1 36 08 8E 06 68  0B 26 03 06 F6 E9 3D 01   .&.6...h .&....=.
C3A0:  00 7C 03 E9 03 00 B8 01  00 99 52 50 8E 06 60 0B   .|...... ..RP..`.
C3B0:  B8 D0 07 26 F7 2E 54 EB  52 50 9A C4 2C AF 0D 8E   ...&..T. RP..,...
C3C0:  06 5E 0B 26 A3 E2 BF 26  89 16 E4 BF 8E 06 64 0B   .^.&...& ......d.
C3D0:  26 A1 30 08 8E 06 68 0B  26 03 06 F0 E9 3D 01 00   &.0...h. &....=..
C3E0:  7C 03 E9 03 00 B8 01 00  99 52 50 8E 06 60 0B B8   |....... .RP..`..
C3F0:  D0 07 26 F7 2E 56 EB 52  50 9A C4 2C AF 0D 8E 06   ..&..V.R P..,....
C400:  5E 0B 26 A3 E6 BF 26 89  16 E8 BF 8E 06 64 0B 26   ^.&...&. .....d.&
C410:  A1 2E 08 8E 06 68 0B 26  03 06 EE E9 3D 01 00 7C   .....h.& ....=..|
C420:  03 E9 03 00 B8 01 00 99  52 50 8E 06 60 0B B8 D0   ........ RP..`...
C430:  07 26 F7 2E 58 EB 52 50  9A C4 2C AF 0D 8E 06 5E   .&..X.RP ..,....^
C440:  0B 26 A3 EA BF 26 89 16  EC BF 8E 06 64 0B 26 A1   .&...&.. ....d.&.
C450:  2C 08 8E 06 68 0B 26 03  06 EC E9 3D 01 00 7C 03   ,...h.&. ...=..|.
C460:  E9 03 00 B8 01 00 99 52  50 8E 06 60 0B B8 D0 07   .......R P..`....
C470:  26 F7 2E 5A EB 52 50 9A  C4 2C AF 0D 8E 06 5E 0B   &..Z.RP. .,....^.
C480:  26 A3 EE BF 26 89 16 F0  BF 5E 5F 8B E5 5D CB 55   &...&... .^_..].U
C490:  8B EC 81 EC 02 00 57 56  C7 46 FE 00 00 E9 03 00   ......WV .F......
C4A0:  FF 46 FE 83 7E FE 06 7C  03 E9 5A 00 8E 06 6A 0B   .F..~..| ..Z...j.
C4B0:  8B 5E FE D1 E3 26 8B 87  36 00 8E 06 6C 0B 8B 5E   .^...&.. 6...l..^
C4C0:  FE D1 E3 26 03 87 1E 08  3D 01 00 7C 03 E9 03 00   ...&.... =..|....
C4D0:  B8 01 00 99 52 50 8E 06  6E 0B 8B 5E FE D1 E3 B8   ....RP.. n..^....
C4E0:  D0 07 26 F7 AF 76 D1 52  50 9A C4 2C AF 0D 8E 06   ..&..v.R P..,....
C4F0:  70 0B 8B 5E FE D1 E3 D1  E3 26 89 87 24 C9 26 89   p..^.... .&..$.&.
C500:  97 26 C9 E9 9A FF 8E 06  64 0B 26 A1 2A 08 8E 06   .&...... d.&.*...
C510:  68 0B 26 03 06 EA E9 3D  01 00 7C 03 E9 03 00 B8   h.&....= ..|.....
C520:  01 00 99 52 50 8E 06 60  0B B8 D0 07 26 F7 2E 6A   ...RP..` ....&..j
C530:  EB 52 50 9A C4 2C AF 0D  8E 06 5E 0B 26 A3 D2 BF   .RP..,.. ..^.&...
C540:  26 89 16 D4 BF B8 06 00  50 B8 12 08 B9 AA 14 51   &....... P......Q
C550:  50 BA 76 D1 BB 62 23 53  52 9A B5 13 14 0B 83 C4   P.v..b#S R.......
C560:  0A 8E 06 72 0B 26 8B 1E  14 08 8E 06 6E 0B D1 E3   ...r.&.. ....n...
C570:  26 8B 87 76 D1 8E 06 72  0B 26 8B 1E 16 08 D1 E3   &..v...r .&......
C580:  8E 06 6E 0B 26 03 87 76  D1 8E 06 72 0B 26 8B 1E   ..n.&..v ...r.&..
C590:  12 08 D1 E3 8E 06 6E 0B  26 03 87 76 D1 99 8E 06   ......n. &..v....
C5A0:  5E 0B 26 A3 F2 BF 26 89  16 F4 BF 8E 06 72 0B 26   ^.&...&. .....r.&
C5B0:  8B 1E 14 08 8E 06 6C 0B  D1 E3 26 8B 87 1E 08 8E   ......l. ..&.....
C5C0:  06 72 0B 26 8B 1E 16 08  D1 E3 8E 06 6C 0B 26 03   .r.&.... ....l.&.
C5D0:  87 1E 08 8E 06 72 0B 26  8B 1E 12 08 D1 E3 8E 06   .....r.& ........
C5E0:  6C 0B 26 03 87 1E 08 8E  06 72 0B 26 8B 1E 14 08   l.&..... .r.&....
C5F0:  8E 06 6A 0B D1 E3 26 03  87 36 00 8E 06 72 0B 26   ..j...&. .6...r.&
C600:  8B 1E 16 08 D1 E3 8E 06  6A 0B 26 03 87 36 00 8E   ........ j.&..6..
C610:  06 72 0B 26 8B 1E 12 08  D1 E3 8E 06 6A 0B 26 03   .r.&.... ....j.&.
C620:  87 36 00 3D 01 00 7C 03  E9 03 00 B8 01 00 99 52   .6.=..|. .......R
C630:  50 B8 E0 2E BA 00 00 52  50 8E 06 5E 0B 26 FF 36   P......R P..^.&.6
C640:  F4 BF 26 FF 36 F2 BF 9A  5E 2D AF 0D 52 50 9A C4   ..&.6... ^-..RP..
C650:  2C AF 0D 8E 06 5E 0B 26  A3 D6 BF 26 89 16 D8 BF   ,....^.& ...&....
C660:  B8 E8 03 BA 00 00 52 50  26 FF 36 F4 BF 26 FF 36   ......RP &.6..&.6
C670:  F2 BF 26 FF 36 D8 BF 26  FF 36 D6 BF 9A 5E 2D AF   ..&.6..& .6...^-.
```

```
B_ENROLL.DMP              Tuesday, July 13, 1993 1:12 pm              Page 61

C680:  0D 52 50 9A C4 2C AF 0D  8E 06 5E 0B 26 A3 DE BF   .RP..,.. ..^.&...
C690:  26 89 16 E0 BF 5E 5F 8B  E5 5D CB 55 8B EC 81 EC   &....^_. .].U....
C6A0:  06 00 57 56 C7 46 FE 00  00 C7 46 FC 00 00 E9 03   ..WV.F.. ..F.....
C6B0:  00 FF 46 FC 8B 46 0A 39  46 FC 7C 03 E9 2A 00 8B   ..F..F.9 F.|..*..
C6C0:  5E FC D1 E3 C4 76 06 8B  46 FE 26 39 00 7F 03 E9   ^....v.. F.&9....
C6D0:  14 00 8B 5E FC D1 E3 C4  76 06 26 8B 00 89 46 FE   ...^.... v.&...F.
C6E0:  8B 46 FC 89 46 FA E9 C8  FF 8B 46 FC E9 00 00 5E   .F..F... ..F....^
C6F0:  5F 8B E5 5D CB 55 8B EC  81 EC 06 00 57 56 C7 46   _..].U.. ....WV.F
C700:  FC 00 00 E9 03 00 FF 46  FC 8B 46 0E 39 46 FC 7C   .......F ..F.9F.|
C710:  03 E9 11 00 8B 5E FC D1  E3 C4 76 0A 8B 46 FC 26   .....^.. ..v..F.&
C720:  89 00 E9 E1 FF C7 46 FC  00 00 E9 03 00 FF 46 FC   ......F. ......F.
C730:  8B 46 0E 48 3B 46 FC 7F  03 E9 7B 00 8B 46 FC 40   .F.H;F.. ..{..F.@
C740:  89 46 FA E9 03 00 FF 46  FA 8B 46 0E 39 46 FA 7C   .F.....F ..F.9F.|
C750:  03 E9 60 00 8B 5E FC D1  E3 C4 76 0A 26 8B 18 D1   ..`..^.. ..v.&...
C760:  E3 C4 76 06 26 8B 00 8B  5E FA D1 E3 C4 76 0A 26   ..v.&... ^....v.&
C770:  8B 18 D1 E3 C4 76 06 26  39 00 7F 03 E9 32 00 8B   .....v.& 9....2..
C780:  5E FC D1 E3 C4 76 0A 26  8B 00 89 46 FE 8B 5E FA   ^....v.& ...F..^.
C790:  D1 E3 C4 76 0A 26 8B 00  8B 5E FC D1 E3 C4 76 0A   ...v.&.. .^....v.
C7A0:  26 89 00 8B 5E FA D1 E3  C4 76 0A 8B 46 FE 26 89   &...^... .v..F.&.
C7B0:  00 E9 92 FF E9 76 FF 5E  5F 8B E5 5D CB 00 55 8B   .....v.^ _..]..U.
C7C0:  EC 81 EC 24 00 57 56 83  7E 06 00 75 03 E9 19 00   ...$.WV. ~..u....
C7D0:  9A BB 05 5B 0C 3D 00 00  75 03 E9 09 00 B8 00 00   ...[.=.. u.......
C7E0:  BA 00 00 E9 B5 01 E9 3F  00 C7 46 DE 01 00 E9 03   .......? ..F.....
C7F0:  00 FF 46 DE 83 7E DE 06  7C 03 E9 2B 00 FF 76 0E   ..F..~.. |..+..v.
C800:  FF 76 0C FF 76 0A FF 76  08 FF 76 DE 9A F1 01 5B   .v..v..v ..v....[
C810:  0C 83 C4 0A 3D 00 00 75  03 E9 09 00 B8 00 00 BA   ....=..u ........
C820:  00 00 E9 76 01 E9 C9 FF  FF 36 96 0D FF 36 94 0D   ...v.... .6...6..
C830:  9A 58 1D AF 0D 83 C4 04  FF 36 96 0D FF 36 94 0D   .X...... .6...6..
C840:  8B F0 9A 58 1D AF 0D 83  C4 04 8B C8 80 C1 08 D3   ...X.... ........
C850:  E6 89 76 DC FF 36 96 0D  FF 36 94 0D B8 04 00 50   ..v..6.. .6.....P
C860:  B8 02 00 50 8D 46 E4 16  50 9A 90 07 AF 0D 83 C4   ...P.F.. P.......
C870:  0C FF 36 96 0D FF 36 94  0D 9A 58 1D AF 0D 83 C4   ..6...6. ..X.....
C880:  04 3D 0A 00 75 03 E9 03  00 E9 E5 FF 83 7E 10 00   .=..u... .....~..
C890:  75 03 E9 5B 00 8E 06 74  0B 26 FF 36 F8 00 8E 06   u..[...t .&.6....
C8A0:  76 0B 26 FF 36 F6 00 9A  92 07 5B 0C 83 C4 04 8E   v.&.6... ..[.....
C8B0:  06 78 0B 26 A3 3E CE 26  89 16 40 CE 26 A1 40 CE   .x.&.>.& ..@.&.@.
C8C0:  26 0B 06 3E CE 74 03 E9  26 00 B8 FC 03 1E 50 9A   &..>.t.. &.....P.
C8D0:  BA 0A AF 0D 83 C4 04 FF  36 96 0D FF 36 94 0D 9A   ........ 6...6...
C8E0:  3A 06 AF 0D 83 C4 04 B8  00 00 BA 00 00 E9 AB 00   :....... ........
C8F0:  8E 06 78 0B 26 A1 3E CE  26 8B 16 40 CE 89 46 E0   ..x.&.>. &..@..F.
C900:  89 56 E2 C7 46 DE 00 00  E9 03 00 FF 46 DE 8E 06   .V..F... ....F...
C910:  74 0B 8B 46 DE 26 39 06  F8 00 7F 03 E9 40 00 FF   t..F.&9. .....@..
C920:  36 96 0D FF 36 94 0D 8E  06 76 0B 26 FF 36 F6 00   6...6... .v.&.6..
C930:  B8 01 00 50 FF 76 E2 FF  76 E0 9A 90 07 AF 0D 83   ...P.v.. v.......
C940:  C4 0C 8E 06 76 0B 26 A1  F6 00 99 2B DB 8B C8 01   ....v.&. ...+....
C950:  4E E0 13 DA B9 0C 00 D3  E3 01 5E E2 E9 AC FF FF   N....... ..^.....
C960:  36 96 0D FF 36 94 0D 9A  3A 06 AF 0D 83 C4 04 8E   6...6... :.......
C970:  06 76 0B 26 A1 F6 00 C4  5E 12 26 89 07 8E 06 74   .v.&.... ^.&....t
C980:  0B 26 A1 F8 00 C4 5E 16  26 89 07 8E 06 78 0B 26   .&....^. &....x.&
C990:  A1 3E CE 26 8B 16 40 CE  E9 00 00 5E 5F 8B E5 5D   .>.&..@. ...^_..]
C9A0:  CB 55 8B EC 81 EC 06 00  57 56 C7 46 FA 00 00 8B   .U...... WV.F....
C9B0:  46 06 E9 40 01 83 7E 0C  00 7D 03 E9 0A 00 81 7E   F..@..~. .}.....~
C9C0:  0C 00 04 7F 03 E9 15 00  FF 76 0C B8 AC 04 1E 50   ........ .v.....P
```

```
C9D0:  9A BA 0A AF 0D 83 C4 06  C7 46 FA 01 00 E9 36 01   ........ .F...6.
C9E0:  83 7E 0E 00 7D 03 E9 0A  00 81 7E 0E 00 04 7F 03   .~..}... ..~.....
C9F0:  E9 15 00 FF 76 0E B8 C9  04 1E 50 9A BA 0A AF 0D   ....v... ..P.....
CA00:  83 C4 06 C7 46 FA 01 00  E9 0B 01 B8 E6 04 1E 50   ....F... .......P
CA10:  FF 76 0A FF 76 08 9A 34  07 AF 0D 83 C4 08 A3 94   .v..v..4 ........
CA20:  0D 89 16 96 0D A1 96 0D  0B 06 94 0D 74 03 E9 18   ........ ....t...
CA30:  00 FF 76 0A FF 76 08 B8  E9 04 1E 50 9A BA 0A AF   ..v..v.. ...P....
CA40:  0D 83 C4 08 C7 46 FA 01  00 E9 CA 00 FF 36 96 0D   .....F.. .....6..
CA50:  FF 36 94 0D 9A 58 1D AF  0D 83 C4 04 FF 36 96 0D   .6...X.. .....6..
CA60:  FF 36 94 0D 9A 58 1D AF  0D 83 C4 04 FF 36 96 0D   .6...X.. .....6..
CA70:  FF 36 94 0D 9A 58 1D AF  0D 83 C4 04 89 46 FE FF   .6...X.. .....F..
CA80:  36 96 0D FF 36 94 0D 9A  58 1D AF 0D 83 C4 04 8A   6...6... X.......
CA90:  E0 2A C0 01 46 FE 8E 06  76 0B 26 83 3E F6 00 00   .*..F... v.&.>...
CAA0:  74 03 E9 07 00 8B 46 FE  26 A3 F6 00 E9 67 00 FF   t.....F. &....g..
CAB0:  36 96 0D FF 36 94 0D 9A  58 1D AF 0D 83 C4 04 89   6...6... X.......
CAC0:  46 FC FF 36 96 0D FF 36  94 0D 9A 58 1D AF 0D 83   F..6...6 ...X....
CAD0:  C4 04 8A E0 2A C0 01 46  FC 8E 06 74 0B 26 83 3E   ....*..F ...t.&.>
CAE0:  F8 00 00 74 03 E9 07 00  8B 46 FC 26 A3 F8 00 E9   ...t.... .F.&....
CAF0:  24 00 E9 21 00 48 75 03  E9 BA FE 48 75 03 E9 DF   $..!.Hu. ...Hu...
CB00:  FE 48 75 03 E9 04 FF 48  75 03 E9 3F FF 48 75 03   .Hu....H u..?.Hu.
CB10:  E9 9C FF E9 00 00 8B 46  FA E9 00 00 5E 5F 8B E5   .......F ....^_..
CB20:  5D CB 55 8B EC 81 EC 00  00 57 56 9A 9F 03 5B 0C   ].U..... .WV...[.
CB30:  3D 00 00 74 03 E9 06 00  B8 FF FF E9 0B 00 9A 28   =..t.... .......(
CB40:  06 5B 0C B8 00 00 E9 00  00 5E 5F 8B E5 5D CB 55   .[...... .^_..].U
CB50:  8B EC 81 EC 5C 00 57 56  8E 06 7A 0B 26 C6 06 BC   ....\.WV ..z.&...
CB60:  D1 00 26 C7 06 C4 D1 00  00 B8 FC 04 1E 50 B8 20   ..&..... .....P.
CB70:  04 1E 50 9A 34 07 AF 0D  83 C4 08 89 46 A4 89 56   ..P.4... ....F..V
CB80:  A6 0B D0 74 03 E9 2C 00  8E 06 7C 0B 26 83 3E F0   ...t..,. ..|.&.>.
CB90:  00 00 74 03 E9 17 00 B8  FE 04 1E 50 B8 20 04 1E   ..t..... ...P. ..
CBA0:  50 B8 16 05 1E 50 9A BA  0A AF 0D 83 C4 0C B8 00   P....P.. ........
CBB0:  00 E9 B1 01 8D 46 AA 16  50 8D 46 FE 16 50 B8 1E   .....F.. P.F..P..
CBC0:  05 1E 50 FF 76 A6 FF 76  A4 9A 02 09 AF 0D 83 C4   ..P.v..v ........
CBD0:  10 89 46 FC 83 7E FC FF  74 03 E9 03 00 E9 71 01   ..F..~.. t.....q.
CBE0:  83 7E FC 00 7F 03 E9 65  01 8A 46 FE 98 E9 F1 00   .~.....e ..F.....
CBF0:  8D 46 AA 16 50 B8 29 05  1E 50 B8 82 D1 B9 62 23   .F..P.). .P....b#
CC00:  51 50 9A 96 28 AF 0D 83  C4 0C E9 41 01 B8 BA D1   QP..(... ...A....
CC10:  B9 62 23 51 50 B8 2C 05  1E 50 8D 46 AA 16 50 9A   .b#QP.,. .P.F..P.
CC20:  02 29 AF 0D 83 C4 0C E9  24 01 A1 7E 0B 8B 16 80   .)...... $..~....
CC30:  0B 8E 06 7A 0B 26 A3 B6  D1 26 89 16 B8 D1 B8 B6   ...z.&.. .&......
CC40:  D1 06 50 B8 30 05 1E 50  8D 46 AA 16 50 9A 02 29   ..P.0..P .F..P..)
CC50:  AF 0D 83 C4 0C E9 F6 00  8D 46 A8 16 50 8D 4E FA   ........ .F..P.N.
CC60:  16 51 B9 33 05 1E 51 8D  4E AA 16 51 9A 02 29 AF   .Q.3..Q. N..Q..).
CC70:  0D 83 C4 10 8B 46 A8 48  8E 06 7A 0B 26 A3 C4 D1   .....F.H ..z.&...
CC80:  E9 CB 00 8E 06 7A 0B 26  C6 06 BC D1 01 B8 BE D1   .....z.& ........
CC90:  06 50 B8 C2 D1 06 50 B8  8F D1 06 50 B8 3B 05 1E   .P....P. ...P.;..
CCA0:  50 8D 46 AA 16 50 9A 02  29 AF 0D 83 C4 14 E9 9D   P.F..P.. ).......
CCB0:  00 8D 46 A8 16 50 B9 A9  D1 BA 62 23 52 51 B9 45   ..F..P.. ..b#RQ.E
CCC0:  05 1E 51 8D 4E AA 16 51  9A 02 29 AF 0D 83 C4 10   ..Q.N..Q ..).....
CCD0:  8A 46 A8 8E 06 7A 0B 26  A2 C6 D1 E9 70 00 E9 6D   .F...z.& ....p..m
CCE0:  00 3D 52 00 75 03 E9 C8  FF 7E 03 E9 29 00 2D 41   .=R.u... .~..).-A
CCF0:  00 75 03 E9 34 FF 2D 06  00 75 03 E9 F2 FE 2D 05   .u..4.-. .u....-.
CD00:  00 75 03 E9 52 FF 48 75  03 E9 01 FF 2D 03 00 75   .u..R.Hu ....-..u
CD10:  03 E9 6F FF E9 37 00 2D  61 00 3D 11 00 76 03 E9   ..o..7.- a.=..v..
```

```
CD20:  2C 00 D1 E0 93 2E FF A7  7A 05 7A 04 9E 05 9E 05   ,....... z.z.....
CD30:  9E 05 9E 05 9E 05 40 04  9E 05 9E 05 9E 05 9E 05   ......@. ........
CD40:  A8 04 5D 04 9E 05 9E 05  D3 04 9E 05 01 05 E9 63   ..]..... .......c
CD50:  FE FF 76 A6 FF 76 A4 9A  3A 06 AF 0D 83 C4 04 B8   ..v..v.. :.......
CD60:  01 00 E9 00 00 5E 5F 8B  E5 5D CB 55 8B EC 81 EC   .....^_. .].U....
CD70:  00 00 57 56 B8 00 00 E9  00 00 5E 5F 8B E5 5D CB   ..WV.... ..^_..].
CD80:  55 8B EC 81 EC 00 00 57  56 A1 12 04 2B 06 14 04   U......W V...+...
CD90:  8E 06 76 0B 26 A3 F6 00  A1 16 04 2B 06 18 04 8E   ..v.&... ...+....
CDA0:  06 74 0B 26 A3 F8 00 5E  5F 8B E5 5D CB 55 8B EC   .t.&...^ _..].U..
CDB0:  81 EC 00 00 57 56 8E 06  76 0B 26 A1 F6 00 C4 5E   ....WV.. v.&....^
CDC0:  06 26 89 07 8E 06 74 0B  26 A1 F8 00 C4 5E 0A 26   .&....t. &....^.&
CDD0:  89 07 5E 5F 8B E5 5D CB  55 8B EC 81 EC 74 00 57   ..^_..]. U....t.W
CDE0:  56 8D 7E F4 BE 4C 05 8C  D0 8E C0 B9 05 00 F3 A5   V.~..L.. ........
CDF0:  A4 8E 06 82 0B 26 C7 06  7A EB 04 00 B8 57 05 1E   .....&.. z....W..
CE00:  50 8D 46 F4 16 50 9A 34  07 AF 0D 83 C4 08 89 46   P.F..P.4 .......F
CE10:  F0 89 56 F2 0B D0 75 03  E9 89 00 FF 76 F2 FF 76   ..V...u. ....v..v
CE20:  F0 B8 64 00 50 8D 4E 8C  16 51 9A 1C 28 AF 0D 83   ..d.P.N. .Q..(...
CE30:  C4 0A B8 FA 00 B9 60 31  51 50 B8 7A EB B9 AA 14   ......`1 QP.z....
CE40:  51 50 B8 5A 05 1E 50 8D  46 8C 16 50 9A 02 29 AF   QP.Z..P. F..P..).
CE50:  0D 83 C4 10 FF 76 F2 FF  76 F0 B8 64 00 50 8D 46   .....v.. v..d.P.F
CE60:  8C 16 50 9A 1C 28 AF 0D  83 C4 0A B8 18 04 1E 50   ..P..(.. .......P
CE70:  B8 16 04 1E 50 B8 14 04  1E 50 B8 12 04 1E 50 B8   ....P... .P....P.
CE80:  62 05 1E 50 8D 46 8C 16  50 9A 02 29 AF 0D 83 C4   b..P.F.. P..)....
CE90:  18 FF 76 F2 FF 76 F0 9A  3A 06 AF 0D 83 C4 04 9A   ..v..v.. :.......
CEA0:  04 07 5B 0C 9A D0 05 5B  0C 9A 28 00 14 0B 5E 5F   ..[....[ ..(...^_
CEB0:  8B E5 5D CB 55 8B EC 81  EC 00 00 57 56 8E 06 82   ..].U... ...WV...
CEC0:  0B 26 A1 7A EB E9 2D 00  B8 72 05 1E 50 B8 1A 04   .&.z..-. .r..P...
CED0:  1E 50 9A CA 25 AF 0D 83  C4 08 E9 29 00 B8 82 05   .P..%... ...)....
CEE0:  1E 50 B8 1A 04 1E 50 9A  CA 25 AF 0D 83 C4 08 E9   .P....P. .%......
CEF0:  14 00 E9 11 00 48 48 75  03 E9 CC FF 48 48 75 03   .....HHu ....HHu.
CF00:  E9 DA FF E9 00 00 5E 5F  8B E5 5D CB 55 8B EC 81   ......^_ ..].U...
CF10:  EC 00 00 57 56 FF 76 08  FF 76 06 9A 92 07 5B 0C   ...WV.v. .v....[.
CF20:  83 C4 04 8E 06 78 0B 26  A3 3E CE 26 89 16 40 CE   .....x.& .>.&..@.
CF30:  26 A1 3E CE 26 8B 16 40  CE E9 00 00 5E 5F 8B E5   &.>.&..@ ....^_..
CF40:  5D CB 55 8B EC 81 EC 00  00 57 56 B8 01 00 50 8B   ].U..... .WV...P.
CF50:  46 08 F7 6E 06 52 50 9A  88 29 AF 0D 83 C4 06 E9   F..n.RP. .)......
CF60:  00 00 5E 5F 8B E5 5D CB  55 8B EC 81 EC 00 00 57   ..^_..]. U......W
CF70:  56 8E 06 78 0B 26 FF 36  40 CE 26 FF 36 3E CE 9A   V..x.&.6 @.&.6>..
CF80:  7C 29 AF 0D 83 C4 04 5E  5F 8B E5 5D CB 55 8B EC   |).....^ _..].U..
CF90:  81 EC 00 00 57 56 9A B8  07 5B 0C FF 76 08 FF 76   ....WV.. .[..v..v
CFA0:  06 B8 88 05 1E 50 9A BA  0A AF 0D 83 C4 08 B8 00   .....P.. ........
CFB0:  00 50 9A DB 01 AF 0D 83  C4 02 5E 5F 8B E5 5D CB   .P...... ..^_..].
CFC0:  55 8B EC 81 EC 50 00 57  56 8E 06 84 0B 8B 5E 06   U....P.W V.....^.
CFD0:  D1 E3 D1 E3 26 8B 87 42  CE 26 8B 97 44 CE 89 46   ....&..B .&..D..F
CFE0:  B6 89 56 B8 83 7E B6 FF  74 03 E9 0F 00 83 7E B8   ..V..~.. t.....~.
CFF0:  FF 74 03 E9 06 00 B8 FF  FF E9 50 00 B8 00 00 50   .t...... ..P....P
D000:  8D 46 B0 16 50 FF 76 B8  FF 76 B6 9A A9 01 00 00   .F..P.v. .v......
D010:  83 C4 0A 40 74 03 E9 06  00 B8 FF FF E9 2D 00 B8   ...@t... .....-..
D020:  00 00 50 B9 00 00 BA 62  23 52 51 8D 4E B0 16 51   ..P....b #RQ.N..Q
D030:  9A DF 01 00 00 83 C4 0A  3D 00 00 75 03 E9 06 00   ........ =..u....
D040:  B8 FF FF E9 06 00 B8 00  00 E9 00 00 5E 5F 8B E5   ........ ....^_..
D050:  5D CB 55 8B EC 81 EC 3A  00 57 56 B8 1A 04 B9 60   ].U....: .WV....`
D060:  31 51 50 8D 46 CE 16 50  9A CA 25 AF 0D 83 C4 08   1QP.F..P ..%.....
```

```
D070:  B8 00 00 50 8D 4E C6 16  51 8E 06 84 0B 26 FF 36   ...P.N.. Q....&.6
D080:  44 CE 26 FF 36 42 CE 9A  A9 01 00 00 83 C4 0A B8   D.&.6B.. ........
D090:  00 00 E9 00 00 5E 5F 8B  E5 5D CB 00 55 8B EC 81   .....^_. .]..U...
D0A0:  EC 00 00 57 56 C7 06 8E  05 FF FF C7 06 90 05 00   ...WV... ........
D0B0:  00 C7 06 92 05 FF FF 5E  5F 8B E5 5D CB 55 8B EC   .......^ _..].U..
D0C0:  81 EC 00 00 57 56 C4 5E  0A 26 8A 07 C4 5E 06 26   ....WV.^ .&...^.&
D0D0:  32 07 25 7F 00 C4 5E 0A  26 31 07 B1 07 C4 5E 06   2.%...^. &1....^.
D0E0:  26 8B 47 02 D3 E0 C4 5E  0A 26 33 07 25 80 7F C4   &.G....^ .&3.%...
D0F0:  5E 0A 26 31 07 C4 5E 0A  8B 46 06 8B 56 08 05 08   ^.&1..^. .F..V...
D100:  00 1E 8D 7F 02 8B F0 8E  DA B9 06 00 F3 A5 1F C4   ........ ........
D110:  5E 0A 8B 46 06 8B 56 08  05 14 00 1E 8D 7F 0E 8B   ^..F..V. ........
D120:  F0 8E DA B9 06 00 F3 A5  1F 5E 5F 8B E5 5D CB 55   ........ .^_..].U
D130:  8B EC 81 EC 00 00 57 56  C4 5E 06 26 8A 07 25 7F   ......WV .^.&..%.
D140:  00 C4 5E 0A 26 89 07 B1  07 C4 5E 06 26 8B 07 25   ..^.&... ..^.&..%
D150:  80 7F D3 E8 C4 5E 0A 26  89 47 02 C4 5E 0A 8B 46   .....^.& .G..^..F
D160:  06 8B 56 08 05 02 00 1E  8D 7F 08 8B F0 8E DA B9   ..V..... ........
D170:  06 00 F3 A5 1F C4 5E 0A  8B 46 06 8B 56 08 05 0E   ......^. .F..V...
D180:  00 1E 8D 7F 14 8B F0 8E  DA B9 06 00 F3 A5 1F 5E   ........ .......^
D190:  5F 8B E5 5D CB 55 8B EC  81 EC 00 00 57 56 C4 5E   _..].U.. ....WV.^
D1A0:  06 26 8B 07 25 FE 01 D1  F8 C4 5E 0A 26 8A 6F 01   .&..%... ..^.&.o.
D1B0:  2A C9 0B C1 C4 5E 0A 26  89 07 C4 5E 06 26 8B 47   *....^.& ...^.&.G
D1C0:  02 25 FE 01 D1 F8 C4 5E  0A 26 8A 0F 80 E1 FF 8A   .%.....^ .&......
D1D0:  D1 8A F0 C4 5E 0A 26 89  17 C4 5E 0A 26 8B 47 02   ....^.&. ..^.&.G.
D1E0:  C4 5E 06 26 33 47 0C 25  FF 01 2B D2 C4 5E 0A 26   .^.&3G.% ..+..^.&
D1F0:  31 47 02 26 31 57 04 C4  5E 06 26 8B 47 06 99 8A   1G.&1W.. ^.&.G...
D200:  F2 8A D4 8A E0 2A C0 D1  E0 D1 D2 C4 5E 0A 26 33   .....*.. ....^.&3
D210:  47 02 26 33 57 04 25 00  FE 83 E2 03 C4 5E 0A 26   G.&3W.%. .....^.&
D220:  31 47 02 26 31 57 04 C4  5E 06 26 8B 47 12 99 D1   1G.&1W.. ^.&.G...
D230:  E0 D1 E0 C4 5E 0A 26 33  47 04 25 FC 07 2B C9 C4   ....^.&3 G.%..+..
D240:  5E 0A 26 31 4F 02 26 31  47 04 B1 03 C4 5E 06 26   ^.&1O.&1 G....^.&
D250:  8A 47 18 25 01 00 8A E0  2A C0 D3 E0 C4 5E 0A 26   .G.%.... *....^.&
D260:  33 47 04 25 00 08 2B D2  C4 5E 0A 26 31 57 02 26   3G.%..+. .^.&1W.&
D270:  31 47 04 C4 5E 06 26 8A  47 18 25 08 00 D3 E8 8A   1G..^.&. G.%.....
D280:  E0 2A C0 B1 04 D3 E0 C4  5E 0A 26 33 47 04 25 00   .*...... ^.&3G.%.
D290:  10 2B D2 C4 5E 0A 26 31  57 02 26 31 47 04 C4 5E   .+..^.&1 W.&1G..^
D2A0:  06 26 8A 47 18 25 10 00  D3 E8 8A E0 2A C0 B1 05   .&.G.%.. ....*...
D2B0:  D3 E0 C4 5E 0A 26 33 47  04 25 00 20 2B C9 C4 5E   ...^.&3G .%. +..^
D2C0:  0A 26 31 4F 02 26 31 47  04 C4 5E 0A 26 83 67 02   .&1O.&1G ..^.&.g.
D2D0:  FF 26 81 67 04 FF BF C4  5E 06 26 8B 47 0E D1 F8   .&.g.... ^.&.G...
D2E0:  D1 F8 C4 5E 0A 26 88 47  06 5E 5F 8B E5 5D CB 55   ...^.&.G .^_..].U
D2F0:  8B EC 81 EC 00 00 57 56  C4 5E 06 26 8A 07 2A E4   ......WV .^.&..*.
D300:  D1 E0 C4 5E 0A 26 89 07  C4 5E 06 26 8A 47 01 2A   ...^.&.. .^.&.G.*
D310:  E4 D1 E0 C4 5E 0A 26 89  47 02 C4 5E 06 26 8B 47   ....^.&. G..^.&.G
D320:  02 25 FF 01 C4 5E 0A 26  89 47 0C C4 5E 0A 26 81   .%...^.& .G..^.&.
D330:  7F 0C 68 01 7F 03 E9 09  00 C4 5E 0A 26 C7 47 0C   ..h..... ..^.&.G.
D340:  FF FF C4 5E 06 26 8B 47  02 26 8B 57 04 8A C4 8A   ...^.&.G .&.W....
D350:  E2 8A D6 2A F6 D1 EA D1  D8 25 FF 01 C4 5E 0A 26   ...*.... .%...^.&
D360:  89 47 06 C4 5E 0A 26 81  7F 06 68 01 7F 03 E9 09   .G..^.&. ..h.....
D370:  00 C4 5E 0A 26 C7 47 06  FF FF C4 5E 06 26 8B 47   ..^.&.G. ...^.&.G
D380:  04 D1 E8 D1 E8 25 FF 01  C4 5E 0A 26 89 47 12 C4   .....%.. .^.&.G..
D390:  5E 0A 26 81 7F 12 68 01  7F 03 E9 09 00 C4 5E 0A   ^.&...h. ......^.
D3A0:  26 C7 47 12 FF FF C4 5E  06 26 8A 47 06 2A E4 D1   &.G....^ .&.G.*..
D3B0:  E0 D1 E0 C4 5E 0A 26 89  47 0E B1 03 C4 5E 06 26   ....^.&. G....^.&
```

```
D3C0:  8A 47 05 2A E4 D3 E8 C4  5E 0A 26 32 47 18 25 01   .G.*.... ^.&2G.%.
D3D0:  00 C4 5E 0A 26 31 47 18  B1 04 C4 5E 06 26 8A 47   ..^.&1G. ...^.&.G
D3E0:  05 2A E4 D3 E8 B1 03 D3  E0 C4 5E 0A 26 32 47 18   .*...... ..^.&2G.
D3F0:  25 08 00 C4 5E 0A 26 31  47 18 B1 05 C4 5E 06 26   %...^.&1 G....^.&
D400:  8A 47 05 2A E4 D3 E8 B1  04 D3 E0 C4 5E 0A 26 32   .G.*.... ....^.&2
D410:  47 18 25 10 00 C4 5E 0A  26 31 47 18 C4 5E 0A 26   G.%...^. &1G..^.&
D420:  C7 47 0A FF FF C4 5E 0A  26 C7 47 04 FF FF C4 5E   .G....^. &.G....^
D430:  0A 26 C7 47 10 FF FF C4  5E 0A 26 C7 47 08 FF FF   .&.G.... ^.&.G...
D440:  C4 5E 0A 26 C7 47 14 FF  FF C4 5E 06 26 8A 47 05   .^.&.G.. ..^.&.G.
D450:  2A E4 B1 06 D3 E8 25 01  00 E9 00 00 5E 5F 8B E5   *.....%. ....^_..
D460:  5D CB 55 8B EC 81 EC 0A  00 57 56 C7 46 F8 00 00   ].U..... .WV.F...
D470:  FF 76 0C FF 76 0A FF 76  08 FF 76 06 9A 2D 00 E9   .v..v..v ..v..-..
D480:  0C 83 C4 08 C7 46 FE 00  00 E9 03 00 FF 46 FE C4   .....F.. .....F..
D490:  5E 06 8B 46 FE 26 39 07  7F 03 E9 7A 00 8B 76 FE   ^..F.&9. ...z..v.
D4A0:  D1 E6 C4 5E 06 26 8B 40  24 89 46 FC 83 7E FC FF   ...^.&.@ $.F..~..
D4B0:  75 03 E9 4A 00 B1 03 8B  46 F8 FF 46 F8 D3 E0 03   u..J.... F..F....
D4C0:  46 0A 8B 56 0C 05 1A 00  52 50 B8 1A 00 F7 6E FC   F..V.... RP....n.
D4D0:  03 46 06 8B 56 08 05 0C  04 52 50 9A 05 01 E9 0C   .F..V... .RP.....
D4E0:  83 C4 08 FF 76 FC 8B 46  06 8B 56 08 05 0C 04 52   ....v..F ..V....R
D4F0:  50 9A 0C 00 AA 08 83 C4  06 89 46 FC E9 AD FF B1   P....... ..F.....
D500:  03 8B 76 F8 D3 E6 C4 5E  0A 26 83 48 14 00 26 81   ..v....^ .&.H..&.
D510:  48 16 00 40 E9 75 FF B1  03 C4 5E 06 26 8B 47 02   H..@.u.. ..^.&.G.
D520:  D3 E0 05 1A 00 89 46 FA  8B 46 FA E9 00 00 5E 5F   ......F. .F....^_
D530:  8B E5 5D CB 55 8B EC 81  EC 1E 00 57 56 9A 0C 00   ..].U... ...WV...
D540:  E9 0C FF 76 08 FF 76 06  FF 76 0C FF 76 0A 9A 9F   ...v..v. .v..v...
D550:  00 E9 0C 83 C4 08 C7 46  E4 00 00 E9 03 00 FF 46   .......F .......F
D560:  E4 C4 5E 06 8B 46 E4 26  39 47 02 7F 03 E9 3B 00   ..^..F.& 9G....;.
D570:  8D 46 E6 16 50 B1 03 8B  56 E4 D3 E2 03 56 0A 8B   .F..P... V....V..
D580:  4E 0C 83 C2 1A 51 52 9A  5F 02 E9 0C 83 C4 08 89   N....QR. _.......
D590:  46 E2 FF 76 E2 8D 46 E6  16 50 FF 76 08 FF 76 06   F..v..F. .P.v..v.
D5A0:  9A 21 05 E9 0C 83 C4 0A  E9 B3 FF 5E 5F 8B E5 5D   .!...... ...^_..]
D5B0:  CB 55 8B EC 81 EC 08 00  57 56 B8 1A 00 F7 2E 90   .U...... WV......
D5C0:  05 8B F0 C4 5E 06 8B 46  0A 8B 56 0C 1E 8D B8 0C   ....^..F ..V.....
D5D0:  04 8B F0 8E DA B9 0D 00  F3 A5 1F C7 46 F8 01 00   ........ ....F...
D5E0:  C7 46 FC 01 00 83 3E 92  05 FF 75 03 E9 30 01 B8   .F....>. ..u..0..
D5F0:  1A 00 F7 2E 92 05 8B F0  C4 5E 06 26 F6 80 24 04   ........ .^.&..$.
D600:  08 75 03 E9 AE 00 B8 1A  00 F7 2E 92 05 8B F0 C4   .u...... ........
D610:  5E 06 26 83 B8 10 04 FF  74 03 E9 40 00 B8 1A 00   ^.&..... t..@....
D620:  F7 2E 92 05 8B F0 C4 5E  06 A1 90 05 26 89 80 10   .......^ ....&...
D630:  04 B8 1A 00 F7 2E 90 05  8B F0 C4 5E 06 26 8B 80   ........ ...^.&..
D640:  1A 04 8B C8 B8 1A 00 F7  2E 92 05 8B F0 C4 5E 06   ........ ......^.
D650:  26 89 88 14 04 C7 46 F8  00 00 E9 54 00 B8 1A 00   &.....F. ...T....
D660:  F7 2E 92 05 8B F0 C4 5E  06 26 83 B8 1C 04 FF 74   .......^ .&.....t
D670:  03 E9 3D 00 B8 1A 00 F7  2E 92 05 8B F0 C4 5E 06   ..=..... ......^.
D680:  A1 90 05 26 89 80 1C 04  B8 1A 00 F7 2E 90 05 8B   ...&.... ........
D690:  F0 C4 5E 06 26 8B 80 1A  04 8B C8 B8 1A 00 F7 2E   ..^.&... ........
D6A0:  92 05 8B F0 C4 5E 06 26  89 88 20 04 C7 46 F8 00   .....^.& .. ..F..
D6B0:  00 E9 6B 00 B8 1A 00 F7  2E 92 05 8B F0 C4 5E 06   ..k..... ......^.
D6C0:  26 83 B8 10 04 FF 74 03  E9 54 00 B8 1A 00 F7 2E   &.....t. .T......
D6D0:  92 05 8B F0 C4 5E 06 26  83 B8 16 04 FF 74 03 E9   .....^.& .....t..
D6E0:  3D 00 B8 1A 00 F7 2E 92  05 8B F0 C4 5E 06 A1 90   =....... ....^...
D6F0:  05 26 89 80 10 04 B8 1A  00 F7 2E 90 05 8B F0 C4   .&...... ........
D700:  5E 06 26 8B 80 1A 04 8B  C8 B8 1A 00 F7 2E 92 05   ^.&..... ........
```

```
D710:  8B F0 C4 5E 06 26 89 88  14 04 C7 46 F8 00 00 83   ...^.&.. ...F....
D720:  7E F8 00 74 03 E9 08 00  C7 46 FC 00 00 E9 8F 00   ~..t.... .F......
D730:  83 3E 92 05 FF 75 03 E9  85 00 B8 1A 00 F7 2E 92   .>...u.. ........
D740:  05 8B F0 C4 5E 06 26 8B  80 16 04 A3 92 05 B8 1A   ....^.&. ........
D750:  00 F7 2E 92 05 8B F0 C4  5E 06 26 83 B8 1C 04 FF   ........ ^.&.....
D760:  74 03 E9 57 00 B8 1A 00  F7 2E 92 05 8B F0 C4 5E   t..W.... .......^
D770:  06 26 F6 80 24 04 08 75  03 E9 40 00 B8 1A 00 F7   .&..$..u ..@.....
D780:  2E 92 05 8B F0 C4 5E 06  A1 90 05 26 89 80 1C 04   ......^. ...&....
D790:  B8 1A 00 F7 2E 90 05 8B  F0 C4 5E 06 26 8B 80 1A   ........ ..^.&...
D7A0:  04 8B C8 B8 1A 00 F7 2E  92 05 8B F0 C4 5E 06 26   ........ .....^.&
D7B0:  89 88 20 04 C7 46 FC 00  00 E9 03 00 E9 71 FF 83   .. ..F.. .....q..
D7C0:  7E FC 00 75 03 E9 2A 00  A1 90 05 FF 06 8E 05 8B   ~..u..*. ........
D7D0:  36 8E 05 D1 E6 C4 5E 06  26 89 40 24 B8 1A 00 F7   6.....^. &.@$....
D7E0:  2E 90 05 8B F0 C4 5E 06  26 C7 80 16 04 FF FF E9   ......^. &.......
D7F0:  14 00 B8 1A 00 F7 2E 90  05 8B F0 C4 5E 06 A1 92   ........ ....^...
D800:  05 26 89 80 16 04 B8 1A  00 F7 2E 90 05 8B F0 C4   .&...... ........
D810:  5E 06 A1 8E 05 26 89 80  22 04 A1 90 05 FF 06 90   ^....&.. ".......
D820:  05 A3 92 05 83 7E 0E 00  75 03 E9 C6 00 8B 36 8E   .....~.. u.....6.
D830:  05 D1 E6 C4 5E 06 26 8B  40 24 89 46 FA 83 7E FA   ....^.&. @$.F..~.
D840:  FF 75 03 E9 AD 00 B8 1A  00 F7 6E FA 8B F0 C4 5E   .u...... ..n....^
D850:  06 26 F6 80 24 04 08 75  03 E9 7B 00 B8 1A 00 F7   .&..$..u ..{.....
D860:  6E FA 8B F0 C4 5E 06 26  83 B8 1C 04 FF 74 03 E9   n....^.& .....t..
D870:  65 00 B8 1A 00 F7 6E FA  8B F0 C4 5E 06 26 8B 80   e.....n. ...^.&..
D880:  10 04 89 46 FE B8 1A 00  F7 6E FE 8B F0 C4 5E 06   ...F.... .n....^.
D890:  26 F6 80 24 04 08 75 03  E9 3C 00 B8 1A 00 F7 6E   &..$..u. .<.....n
D8A0:  FE 8B F0 C4 5E 06 26 83  B8 1C 04 FF 74 03 E9 26   ....^.&. ....t..&
D8B0:  00 B8 1A 00 F7 6E FA 8B  F0 C4 5E 06 8B 46 FE 26   .....n.. ..^..F.&
D8C0:  89 80 1C 04 B8 1A 00 F7  6E FE 8B F0 C4 5E 06 8B   ........ n....^..
D8D0:  46 FA 26 89 80 1C 04 FF  76 FA 8B 46 06 8B 56 08   F.&..... v..F..V.
D8E0:  05 0C 04 52 50 9A 0C 00  AA 08 83 C4 06 89 46 FA   ...RP... ......F.
D8F0:  E9 4A FF 5E 5F 8B E5 5D  CB 55 8B EC 81 EC 00 00   .J.^_..] .U......
D900:  57 56 C7 06 8E 05 FF FF  C7 06 90 05 00 00 C7 06   WV...... ........
D910:  92 05 FF FF 5E 5F 8B E5  5D CB 55 8B EC 81 EC 00   ....^_.. ].U.....
D920:  00 57 56 FF 76 08 FF 76  06 B8 A0 05 1E 50 B8 94   .WV.v..v .....P..
D930:  05 1E 50 B8 42 C9 B9 62  23 51 50 9A 96 28 AF 0D   ..P.B..b #QP..(..
D940:  83 C4 10 B8 9D 05 1E 50  B8 42 C9 B9 62 23 51 50   .......P .B..b#QP
D950:  9A 34 07 AF 0D 83 C4 08  A3 9C 0D 89 16 9E 0D A1   .4...... ........
D960:  9E 0D 0B 06 9C 0D 74 03  E9 06 00 B8 FF FF E9 3E   ......t. .......>
D970:  00 B8 3A C1 B9 62 23 51  50 BA 6E 08 BB AA 14 53   ..:..b#Q P.n....S
D980:  52 9A D2 03 E9 0C 83 C4  08 B8 3A C1 B9 62 23 51   R....... ..:..b#Q
D990:  50 9A 2A 02 71 0D 83 C4  04 FF 36 9E 0D FF 36 9C   P.*.q... ..6...6.
D9A0:  0D 9A 3A 06 AF 0D 83 C4  04 B8 00 00 E9 00 00 5E   ..:..... .......^
D9B0:  5F 8B E5 5D CB 55 8B EC  81 EC 00 00 57 56 FF 76   _..].U.. ....WV.v
D9C0:  08 FF 76 06 B8 A0 05 1E  50 B8 A8 05 1E 50 B8 42   ..v..... P....P.B
D9D0:  C9 B9 62 23 51 50 9A 96  28 AF 0D 83 C4 10 B8 B1   ..b#QP.. (.......
D9E0:  05 1E 50 B8 42 C9 B9 62  23 51 50 9A 34 07 AF 0D   ..P.B..b #QP.4...
D9F0:  83 C4 08 A3 9C 0D 89 16  9E 0D A1 9E 0D 0B 06 9C   ........ ........
DA00:  0D 74 03 E9 06 00 B8 FF  FF E9 3C 00 B8 3A C1 B9   .t...... ..<..:..
DA10:  62 23 51 50 9A 8F 02 71  0D 83 C4 04 B8 3A C1 B9   b#QP...q .....:..
DA20:  62 23 51 50 FF 76 0C FF  76 0A 9A A4 04 E9 0C 83   b#QP.v.. v.......
DA30:  C4 08 FF 36 9E 0D FF 36  9C 0D 9A 3A 06 AF 0D 83   ...6...6 ...:....
DA40:  C4 04 B8 00 00 E9 00 00  5E 5F 8B E5 5D CB 55 8B   ........ ^_..].U.
DA50:  EC 81 EC 00 00 57 56 FF  36 9E 0D FF 36 9C 0D B8   .....WV. 6...6...
```

```
DA60:  01 00 50 B9 02 00 51 FF  76 08 FF 76 06 9A 22 09   ..P...Q. v..v..".
DA70:  AF 0D 83 C4 0C FF 36 9E  0D FF 36 9C 0D B8 01 00   ......6. ..6.....
DA80:  50 B9 0C 00 51 8B 56 06  8B 5E 08 83 C2 02 53 52   P...Q.V. .^....SR
DA90:  9A 22 09 AF 0D 83 C4 0C  FF 36 9E 0D FF 36 9C 0D   ."...... .6...6..
DAA0:  B8 01 00 50 B8 0C 00 50  8B 46 06 8B 56 08 05 0E   ...P...P .F..V...
DAB0:  00 52 50 9A 22 09 AF 0D  83 C4 0C 5E 5F 8B E5 5D   .RP."... ...^_..]
DAC0:  CB 55 8B EC 81 EC 00 00  57 56 FF 36 9E 0D FF 36   .U...... WV.6...6
DAD0:  9C 0D B8 01 00 50 B9 02  00 51 FF 76 08 FF 76 06   .....P.. .Q.v..v.
DAE0:  9A 22 09 AF 0D 83 C4 0C  FF 36 9E 0D FF 36 9C 0D   ."...... .6...6..
DAF0:  B8 01 00 50 B9 04 00 51  8B 4E 06 8B 56 08 83 C1   ...P...Q .N..V...
DB00:  02 52 51 9A 22 09 AF 0D  83 C4 0C FF 36 9E 0D FF   .RQ."... ....6...
DB10:  36 9C 0D B8 01 00 50 B8  02 00 50 8B 46 06 8B 56   6.....P. ..P.F..V
DB20:  08 05 06 00 52 50 9A 22  09 AF 0D 83 C4 0C B8 00   ....RP." ........
DB30:  00 E9 00 00 5E 5F 8B E5  5D CB 55 8B EC 81 EC 1C   ....^_.. ].U.....
DB40:  00 57 56 9A 0C 00 E9 0C  FF 76 08 FF 76 06 9A 3E   .WV..... .v..v..>
DB50:  01 71 0D 83 C4 04 C7 46  E4 00 00 E9 03 00 FF 46   .q.....F .......F
DB60:  E4 B1 07 C4 5E 06 26 8B  07 25 80 7F D3 E8 3B 46   ....^.&. .%....;F
DB70:  E4 77 03 E9 1D 00 B1 03  8B 46 E4 D3 E0 03 46 06   .w...... .F....F.
DB80:  8B 56 08 05 1A 00 52 50  9A B1 01 71 0D 83 C4 04   .V....RP ...q....
DB90:  E9 CB FF B8 00 00 E9 00  00 5E 5F 8B E5 5D CB 55   ........ .^_..].U
DBA0:  8B EC 81 EC 1C 00 57 56  9A 0C 00 E9 0C FF 76 08   ......WV ......v.
DBB0:  FF 76 06 9A F4 02 71 0D  83 C4 04 C7 46 E4 00 00   .v....q. ....F...
DBC0:  E9 03 00 FF 46 E4 B1 07  C4 5E 06 26 8B 07 25 80   ....F... .^.&..%.
DBD0:  7F D3 E8 3B 46 E4 77 03  E9 1D 00 B1 03 8B 46 E4   ...;F.w. ......F.
DBE0:  D3 E0 03 46 06 8B 56 08  05 1A 00 52 50 9A 6D 03   ...F..V. ...RP.m.
DBF0:  71 0D 83 C4 04 E9 CB FF  B8 00 00 E9 00 00 5E 5F   q....... ......^_
DC00:  8B E5 5D CB 55 8B EC 81  EC 00 00 57 56 FF 36 9E   ..].U... ...WV.6.
DC10:  0D FF 36 9C 0D B8 01 00  50 B9 02 00 51 FF 76 08   ..6..... P...Q.v.
DC20:  FF 76 06 9A 90 07 AF 0D  83 C4 0C FF 36 9E 0D FF   .v...... ....6...
DC30:  36 9C 0D B8 01 00 50 B9  0C 00 51 8B 56 06 8B 5E   6.....P. ..Q.V..^
DC40:  08 83 C2 02 53 52 9A 90  07 AF 0D 83 C4 0C FF 36   ....SR.. .......6
DC50:  9E 0D FF 36 9C 0D B8 01  00 50 B8 0C 00 50 8B 46   ...6.... .P...P.F
DC60:  06 8B 56 08 05 0E 00 52  50 9A 90 07 AF 0D 83 C4   ..V....R P.......
DC70:  0C B8 00 00 E9 00 00 5E  5F 8B E5 5D CB 55 8B EC   .......^ _..].U..
DC80:  81 EC 00 00 57 56 FF 36  9E 0D FF 36 9C 0D B8 01   ....WV.6 ...6....
DC90:  00 50 B9 02 00 51 FF 76  08 FF 76 06 9A 90 07 AF   .P...Q.v ..v.....
DCA0:  0D 83 C4 0C FF 36 9E 0D  FF 36 9C 0D B8 01 00 50   .....6.. .6.....P
DCB0:  B9 04 00 51 8B 4E 06 8B  56 08 83 C1 02 52 51 9A   ...Q.N.. V....RQ.
DCC0:  90 07 AF 0D 83 C4 0C FF  36 9E 0D FF 36 9C 0D B8   ........ 6...6...
DCD0:  01 00 50 B8 02 00 50 8B  46 06 8B 56 08 05 06 00   ..P...P. F..V....
DCE0:  52 50 9A 90 07 AF 0D 83  C4 0C B8 00 00 E9 00 00   RP...... ........
DCF0:  5E 5F 8B E5 5D CB 00 00  00 00 00 00 00 00 00 00   ^_..]... ........
DD00:  00 00 00 00 00 00 B4 30  CD 21 3C 02 73 05 33 C0   .......0 .!<.s.3.
DD10:  06 50 CB BF 60 31 8B 36  02 00 2B F7 81 FE 00 10   .P..`1.6 ..+.....
DD20:  72 03 BE 00 10 FA 8E D7  81 C4 DE 0F FB 73 12 16   r....... .....s..
DD30:  1F 0E E8 59 02 33 C0 50  0E E8 3B 05 B8 FF 4C CD   ...Y.3.P ..;...L.
DD40:  21 8B C6 B1 04 D3 E0 48  36 A3 B8 05 BB BA 05 36   !......H 6......6
DD50:  8C 17 83 E4 FE 36 89 67  04 B8 FE FF 50 36 89 67   .....6.g ....P6.g
DD60:  0A F7 D0 50 36 89 67 06  36 89 67 08 36 89 26 B4   ...P6.g. 6.g.6.&.
DD70:  05 03 F7 89 36 02 00 8C  C3 2B DE F7 DB B4 4A CD   ....6... .+....J.
DD80:  21 36 8C 1E F4 05 16 07  FC BF 48 0D B9 E0 0F 2B   !6...... ..H....+
DD90:  CF 33 C0 F3 AA 16 1F 8B  0E BE 0A E3 02 FF D1 9A   .3...... ........
DDA0:  BC 04 AF 0D 9A 0E 03 AF  0D 33 ED 9A 16 01 AF 0D   ........ .3......
```

```
DDB0:  16 1F FF 36 19 06 FF 36  17 06 FF 36 15 06 FF 36   ...6...6 ...6...6
DDC0:  13 06 FF 36 11 06 9A 00  00 00 00 50 0E E8 FB 00   ...6.... ...P....
DDD0:  C3 2E A1 13 01 8E D8 B8  03 00 36 C7 06 B6 05 DB   ........ ..6.....
DDE0:  01 50 0E E8 A8 01 0E E8  8D 04 36 81 3E C0 0A D6   .P...... ..6.>...
DDF0:  D6 75 07 58 50 36 FF 16  C4 0A B8 FF 00 50 0E FF   .u.XP6.. .....P..
DE00:  16 B6 05 60 31 00 B8 00  35 CD 21 89 1E E0 05 8C   ...`1... 5.!.....
DE10:  06 E2 05 0E 1F B8 00 25  BA E1 00 CD 21 16 1F 8B   .......% ....!...
DE20:  0E D2 0A E3 2E 8E 06 F4  05 26 8B 36 2C 00 C5 06   ........ .&.6,...
DE30:  D4 0A 8C DA 33 DB 36 FF  1E D0 0A 73 05 16 1F E9   ....3.6. ...s....
DE40:  6E 01 36 C5 06 D8 0A 8C  DA BB 03 00 36 FF 1E D0   n.6..... ....6...
DE50:  0A 16 1F 8E 06 F4 05 26  8B 0E 2C 00 E3 3E 8E C1   .......& ..,..>..
DE60:  33 FF 26 80 3D 00 74 34  B9 0D 00 BE D2 05 F3 A6   3.&.=.t4 ........
DE70:  74 0B B9 FF 7F 33 C0 F2  AE 75 21 EB E5 06 1E 07   t....3.. .u!.....
DE80:  1F 8B F7 BF FD 05 B1 04  AC 2C 41 72 0D D2 E0 92   ........ .,Ar....
DE90:  AC 2C 41 72 05 0A C2 AA  EB EE 16 1F BB 04 00 80   .,Ar.... ........
DEA0:  A7 FD 05 BF B8 00 44 CD  21 72 0A F6 C2 80 74 05   ......D. !r....t.
DEB0:  80 8F FD 05 40 4B 79 E7  BE DC 0A BF DC 0A E8 BA   ....@Ky. ........
DEC0:  00 BE DC 0A BF E0 0A E8  B1 00 CB 55 8B EC 33 C9   ........ ...U..3.
DED0:  EB 1A 55 8B EC B9 01 00  EB 12 55 8B EC 56 57 B9   ..U..... ..U..VW.
DEE0:  00 01 EB 08 55 8B EC 56  57 B9 01 01 51 0A C9 75   ....U..V W...Q..u
DEF0:  1E BE D4 0D BF D4 0D E8  81 00 BE E0 0A BF E4 0A   ........ ........
DF00:  E8 78 00 81 3E C0 0A D6  D6 75 04 FF 16 C6 0A BE   .x..>... .u......
DF10:  E4 0A BF E4 0A E8 63 00  BE E4 0A BF E4 0A E8 5A   ......c. .......Z
DF20:  00 9A EA 02 AF 0D 0B C0  74 11 58 0A E4 50 75 0B   ........ t.X..Pu.
DF30:  83 7E 06 00 75 05 C7 46  06 FF 00 E8 10 00 58 0A   .~..u..F ......X.
DF40:  E4 75 07 8B 46 06 B4 4C  CD 21 5F 5E 5D CB 8B 0E   .u..F..L .!_^]...
DF50:  D2 0A E3 07 BB 02 00 FF  1E D0 0A 1E C5 16 E0 05   ........ ........
DF60:  B8 00 25 CD 21 1F 80 3E  22 06 00 74 0D 1E A0 23   ..%.!..> "..t...#
DF70:  06 C5 16 24 06 B4 25 CD  21 1F C3 3B F7 73 0E 83   ...$..%. !..;.s..
DF80:  EF 04 8B 05 0B 45 02 74  F2 FF 1D EB EE C3 55 8B   .....E.t ......U.
DF90:  EC B8 FC 00 50 0E E8 DE  02 83 3E 2A 06 00 74 04   ....P... ..>*..t.
DFA0:  FF 1E 28 06 B8 FF 00 50  0E E8 CB 02 8B E5 5D CB   ..(....P ......].
DFB0:  B8 02 00 E9 2B FE 59 5A  8B DC 2B D8 72 0B 3B 1E   ....+.YZ ..+.r.;.
DFC0:  30 06 72 05 8B E3 52 51  CB 52 51 A1 2C 06 40 75   0.r...RQ .RQ.,.@u
DFD0:  05 33 C0 E9 0B FE FF 2E  2C 06 56 33 F6 B9 42 00   .3...... ,.V3..B.
DFE0:  32 E4 FC AC 32 E0 E2 FB  80 F4 55 74 0F 0E E8 9D   2...2... ..Ut....
DFF0:  FF B8 01 00 50 0E E8 7E  02 B8 01 00 5E CB 8F 06   ....P..~ ....^...
E000:  32 06 8F 06 34 06 B4 30  CD 21 A3 F6 05 BA 01 00   2...4..0 .!......
E010:  3C 02 74 29 8E 06 F4 05  26 8E 06 2C 00 8C 06 1D   <.t).... &..,....
E020:  06 33 C0 99 B9 00 80 33  FF F2 AE AE 75 FB 47 47   .3.....3 ....u.GG
E030:  89 3E 1B 06 B9 FF FF F2  AE F7 D1 8B D1 BF 01 00   .>...... ........
E040:  BE 81 00 8E 1E F4 05 AC  3C 20 74 FB 3C 09 74 F7   ........ < t.<.t.
E050:  3C 0D 74 6F 0A C0 74 6B  47 4E AC 3C 20 74 E8 3C   <.to..tk GN.< t.<
E060:  09 74 E4 3C 0D 74 5C 0A  C0 74 58 3C 22 74 24 3C   .t.<.t\. .tX<"t$<
E070:  5C 74 03 42 EB E4 33 C9  41 AC 3C 5C 74 FA 3C 22   \t.B..3. A.<\t.<"
E080:  74 04 03 D1 EB D3 8B C1  D1 E9 13 D1 A8 01 75 CA   t....... ......u.
E090:  EB 01 4E AC 3C 0D 74 2B  0A C0 74 27 3C 22 74 BA   ..N.<.t+ ..t'<"t.
E0A0:  3C 5C 74 03 42 EB EC 33  C9 41 AC 3C 5C 74 FA 3C   <\t.B..3 .A.<\t.<
E0B0:  22 74 04 03 D1 EB DB 8B  C1 D1 E9 13 D1 A8 01 75   "t...... .......u
E0C0:  D2 EB 97 16 1F 89 3E 11  06 03 D7 47 D1 E7 D1 E7   ......>. ...G....
E0D0:  03 D7 42 80 E2 FE 2B E2  8B C4 A3 13 06 8C 16 15   ..B...+. ........
E0E0:  06 8B D8 03 FB 16 07 36  89 3F 36 8C 57 02 83 C3   .......6 .?6.W...
E0F0:  04 C5 36 1B 06 AC AA 0A  C0 75 FA 36 8E 1E F4 05   ..6..... .u.6....
```

B_ENROLL.DMP Tuesday, July 13, 1993 1:12 pm Page 69

```
E100:  BE 81 00 EB 03 33 C0 AA  AC 3C 20 74 FB 3C 09 74   .....3.. .< t.<.t
E110:  F7 3C 0D 75 03 E9 84 00  0A C0 75 03 EB 7E 90 36   .<.u.... ..u..~.6
E120:  89 3F 36 8C 57 02 83 C3  04 4E AC 3C 20 74 D6 3C   .?6.W... .N.< t.<
E130:  09 74 D2 3C 0D 74 62 0A  C0 74 5E 3C 22 74 27 3C   .t.<.tb. .t^<"t'<
E140:  5C 74 03 AA EB E4 33 C9  41 AC 3C 5C 74 FA 3C 22   \t....3. A.<\t.<"
E150:  74 06 B0 5C F3 AA EB D1  B0 5C D1 E9 F3 AA 73 06   t..\.... .\....s.
E160:  B0 22 AA EB C5 4E AC 3C  0D 74 2E 0A C0 74 2A 3C   ."...N.< .t...t*<
E170:  22 74 B7 3C 5C 74 03 AA  EB EC 33 C9 41 AC 3C 5C   "t.<\t.. ..3.A.<\
E180:  74 FA 3C 22 74 06 B0 5C  F3 AA EB D9 B0 5C D1 E9   t.<"t..\ .....\..
E190:  F3 AA 73 96 B0 22 AA EB  CD 33 C0 AA 16 1F C7 07   ..s..".. .3......
E1A0:  00 00 C7 47 02 00 00 FF  2E 32 06 00 55 8B EC 83   ...G.... .2..U...
E1B0:  EC 04 1E 8E 06 F4 05 26  8B 1E 2C 00 8E C3 8C 46   .......& ..,....F
E1C0:  FE 33 C0 33 F6 33 FF B9  FF FF 0B DB 74 0E 26 80   .3.3.3.. ....t.&.
E1D0:  3E 00 00 00 74 06 F2 AE  46 AE 75 FA 8B C7 40 24   >...t... F.u...@$
E1E0:  FE 46 8B FE D1 E6 D1 E6  B9 09 00 E8 C0 00 52 50   .F...... ......RP
E1F0:  8B C6 E8 B9 00 A3 17 06  89 16 19 06 89 56 FC 06   ........ .....V..
E200:  1F 8B CF 8B D8 33 F6 5F  07 49 E3 33 8B 04 36 3B   .....3._ .I.3..6;
E210:  06 D2 05 75 14 51 56 57  06 16 07 BF D2 05 B9 06   ...u.QVW ........
E220:  00 F3 A7 07 5F 5E 59 74  0B 8E 5E FC 89 3F 8C 47   ...._^Yt ..^..?.G
E230:  02 83 C3 04 8E 5E FE AC  AA 0A C0 75 FA E2 CD 8E   .....^.. ...u....
E240:  5E FC 89 0F 89 4F 02 1F  8B E5 5D CB 55 8B EC 56   ^....O.. ..].U..V
E250:  57 1E 07 8B 56 06 BE 98  0B AD 3B C2 74 10 40 96   W...V... ..;.t.@.
E260:  74 0C 97 33 C0 B9 FF FF  F2 AE 8B F7 EB EB 96 5F   t..3.... ......._
E270:  5E 8B E5 5D CA 02 00 55  8B EC 57 FF 76 06 0E E8   ^..]...U ..W.v...
E280:  CA FF 0B C0 74 20 92 8B  FA 33 C0 B9 FF FF F2 AE   ....t .. .3......
E290:  F7 D1 49 BB 02 00 81 3E  C0 0A D6 D6 75 04 FF 16   ..I....> ....u...
E2A0:  C2 0A B4 40 CD 21 5F 8B  E5 5D CA 02 00 00 53 06   ...@.!_. .]....S.
E2B0:  51 B9 00 04 87 0E BA 08  51 50 9A BE 22 AF 0D 5B   Q....... QP.."..[
E2C0:  8F 06 BA 08 59 8B DA 0B  D8 74 03 07 5B C3 8B C1   ....Y... .t..[...
E2D0:  E9 0E FB 00 72 15 33 C0  8B E5 5D CB 73 F8 50 E8   ....r.3. ..].s.P.
E2E0:  1A 00 58 32 E4 8B E5 5D  CB 73 07 E8 0E 00 B8 FF   ..X2...] .s......
E2F0:  FF 99 8B E5 5D CB 32 E4  E8 01 00 CB A2 F9 05 0A   ....].2. ........
E300:  E4 75 22 80 3E F6 05 03  72 0C 3C 22 73 0C 3C 20   .u".>... r.<"s.<
E310:  72 04 B0 05 EB 06 3C 13  76 02 B0 13 BB 36 06 D7   r.....<. v....6..
E320:  98 A3 EE 05 C3 8A C4 EB  F7 00 55 8B EC 83 EC 10   ........ ..U.....
E330:  57 56 BF FF FF 8B 76 06  F6 44 0A 40 74 03 E9 A3   WV....v. .D.@t...
E340:  00 F6 44 0A 83 75 03 E9  9A 00 1E 56 9A F0 0E AF   ..D..u.. ...V....
E350:  0D 83 C4 04 8B F8 8B DE  81 EB 50 06 8B 87 44 07   ........ ..P...D.
E360:  89 46 FA 1E 56 E8 32 06  83 C4 04 8A 44 0B 2A E4   .F..V.2. ....D.*.
E370:  50 9A E6 1D AF 0D 83 C4  02 0B C0 7C 64 83 7E FA   P....... ...|d.~.
E380:  00 74 61 B8 4A 06 1E 50  8D 46 F0 16 50 9A CA 25   .ta.J..P .F..P..%
E390:  AF 0D 83 C4 08 8D 46 F2  89 46 FC 8C 56 FE 80 7E   ......F. .F..V..~
E3A0:  F0 5C 74 14 B8 4C 06 1E  50 8D 46 F0 16 50 9A 84   .\t..L.. P.F..P..
E3B0:  25 AF 0D 83 C4 08 EB 03  FF 4E FC B8 0A 00 50 FF   %....... .N....P.
E3C0:  76 FE FF 76 FC FF 76 FA  9A 9A 26 AF 0D 83 C4 08   v..v..v. ..&.....
E3D0:  8D 46 F0 16 50 9A 72 2C  AF 0D 83 C4 04 0B C0 74   .F..P.r, .......t
E3E0:  03 BF FF FF C6 44 0A 00  8B C7 5E 5F 8B E5 5D CB   .....D.. ..^_..].
E3F0:  55 8B EC 83 EC 08 9A 02  1D AF 0D 89 56 FE 0B D0   U....... ....V...
E400:  75 06 2B C0 99 EB 19 90  FF 76 FE 50 FF 76 0E FF   u.+..... .v.P.v..
E410:  76 0C FF 76 0A FF 76 08  FF 76 06 9A 2E 0D AF 0D   v..v..v. .v......
E420:  8B E5 5D CB 55 8B EC 2B  C0 50 FF 76 0C FF 76 0A   ..].U..+ .P.v..v.
E430:  FF 76 08 FF 76 06 9A 00  07 AF 0D 8B E5 5D CB 90   .v..v... .....]..
E440:  55 8B EC 83 EC 06 57 56  8B 76 06 1E 56 E8 C6 06   U.....WV .v..V...
```

```
E450:  83 C4 04 8B F8 8D 46 0E  16 50 FF 76 0C FF 76 0A   ......F. .P.v..v.
E460:  1E 56 9A 18 18 AF 0D 83  C4 0C 89 46 FA 1E 56 57   .V...... ...F..VW
E470:  E8 24 07 83 C4 06 8B 46  FA 5E 5F 8B E5 5D CB 90   .$.....F .^_..]..
E480:  55 8B EC 83 EC 04 56 57  8B 46 0A F7 66 0C 8B C8   U.....VW .F..f...
E490:  0B CA 74 61 89 46 FC 89  56 FE C4 5E 06 8B 76 0E   ..ta.F.. V..^..v.
E4A0:  0B D2 75 1F 3D FF FF 74  1A 8B CB 03 C8 72 14 50   ..u.=..t .....r.P
E4B0:  53 52 8B C8 E8 6A 00 8B  C8 5A 5B 58 2B C1 83 DA   SR...j.. .Z[X+...
E4C0:  00 EB 3C 83 FB 01 77 05  B9 00 80 EB 04 8B CB F7   ..<...w. ........
E4D0:  D9 51 50 53 52 E8 49 00  8B C8 5A 5B 58 5F 2B C1   .QPSR.I. ..Z[X_+.
E4E0:  83 DA 00 3B CF 72 18 03  D9 73 0C 8C C1 81 C1 00   ...;.r.. .s......
E4F0:  10 8E C1 EB 02 EB 24 8B  C8 0B CA 75 A3 EB 00 8B   ......$. ...u....
E500:  C8 0B CA 74 13 8B 4E FC  2B C8 8B C1 8B 4E FE 1B   ...t..N. +....N..
E510:  CA 8B D1 F7 76 0A EB 03  8B 46 0C 5F 5E 8B E5 5D   ....v... .F._^..]
E520:  CB 55 8B EC 83 EC 04 89  4E FE BF 40 07 8B C6 2D   .U...... N..@...-
E530:  50 06 03 F8 F6 44 0A 0C  75 05 F6 05 01 74 05 8B   P....D.. u....t..
E540:  45 02 EB 03 B8 00 02 89  46 FC F6 44 0A 0C 75 05   E....... F..D..u.
E550:  F6 05 01 74 33 8B 44 04  0B C0 74 2C 3B C1 76 02   ...t3.D. ..t,;.v.
E560:  8B C1 50 53 51 06 50 FF  74 02 FF 34 06 53 0E E8   ..PSQ.P. t..4.S..
E570:  A6 22 83 C4 0A 07 59 5B  58 2B C8 29 44 04 03 D8   ."....Y[ X+.)D...
E580:  01 04 EB 00 E3 62 EB C2  3B 4E FC 72 30 33 D2 8B   .....b.. ;N.r03..
E590:  C1 F7 76 FC 8B C1 2B C2  53 51 06 50 06 53 33 C0   ..v...+. SQ.P.S3.
E5A0:  8A 44 0B 50 0E E8 94 17  83 C4 08 07 59 5B 0B C0   .D.P.... ....Y[..
E5B0:  74 2C 3D FF FF 74 2D 2B  C8 03 D8 EB C7 53 51 06   t,=..t-+ .....SQ.
E5C0:  1E 56 0E E8 4C 02 83 C4  04 07 59 5B 3D FF FF 74   .V..L... ..Y[=..t
E5D0:  17 26 88 07 43 49 8B 45  02 89 46 FC EB A6 80 4C   .&..CI.E ..F....L
E5E0:  0A 10 EB 04 80 4C 0A 20  8B 46 FE 2B C1 8B E5 5D   .....L.  .F.+...]
E5F0:  C3 00 55 8B EC 83 EC 06  8D 46 0E 16 50 FF 76 0C   ..U..... .F..P.v.
E600:  FF 76 0A FF 76 08 FF 76  06 9A C4 0F AF 0D 8B E5   .v..v..v ........
E610:  5D CB 55 8B EC 83 EC 04  56 57 8B 46 0A F7 66 0C   ].U..... VW.F..f.
E620:  8B C8 0B CA 74 61 89 46  FC 89 56 FE C4 5E 06 8B   ....ta.F ..V..^..
E630:  76 0E 0B D2 75 1F 3D FF  FF 74 1A 8B CB 03 C8 72   v...u.=. .t.....r
E640:  14 50 53 52 8B C8 E8 6A  00 8B C8 5A 5B 58 2B C1   .PSR...j ...Z[X+.
E650:  83 DA 00 EB 3C 83 FB 01  77 05 B9 00 80 EB 04 8B   ....<... w.......
E660:  CB F7 D9 51 50 53 52 E8  49 00 8B C8 5A 5B 58 5F   ...QPSR. I...Z[X_
E670:  2B C1 83 DA 00 3B CF 72  18 03 D9 73 0C 8C C1 81   +....;.r ...s....
E680:  C1 00 10 8E C1 EB 02 EB  24 8B C8 0B CA 75 A3 EB   ........ $....u..
E690:  00 8B C8 0B CA 74 13 8B  4E FC 2B C8 8B C1 8B 4E   .....t.. N.+....N
E6A0:  FE 1B CA 8B D1 F7 76 0A  EB 03 8B 46 0C 5F 5E 8B   ......v. ...F._^.
E6B0:  E5 5D CB 55 8B EC 83 EC  04 89 4E FE BF 40 07 8B   .].U.... ..N..@..
E6C0:  C6 2D 50 06 03 F8 F6 44  0A 0C 75 05 F6 05 01 74   .-P....D ..u....t
E6D0:  05 8B 45 02 EB 03 B8 00  02 89 46 FC F6 44 0A 08   ..E..... ..F..D..
E6E0:  75 05 F6 05 01 74 36 8B  44 04 0B C0 74 2F 3B C1   u....t6. D...t/;.
E6F0:  76 02 8B C1 50 53 51 06  50 06 53 FF 74 02 FF 34   v...PSQ. P.S.t..4
E700:  0E E8 14 21 83 C4 0A 07  59 5B 58 2B C8 29 44 04   ...!.... Y[X+.)D.
E710:  03 D8 01 04 EB 00 0B C9  75 C2 E9 83 00 3B 4E FC   ........ u....;N.
E720:  72 50 F6 44 0A 08 75 05  F6 05 01 74 13 53 51 06   rP.D..u. ...t.SQ.
E730:  1E 56 0E E8 AA 04 83 C4  04 07 59 5B 0B C0 75 60   .V...... ..Y[..u`
E740:  33 D2 8B C1 F7 76 FC 8B  C1 2B C2 50 53 51 06 50   3....v.. .+.PSQ.P
E750:  06 53 33 C0 8A 44 0B 50  0E E8 DE 16 83 C4 08 07   .S3..D.P ........
E760:  59 5B 5A 3D FF FF 74 34  2B C8 3B C2 75 2E 03 D8   Y[Z=..t4 +.;.u...
E770:  EB A4 33 C0 26 8A 07 53  51 06 1E 56 50 0E E8 2D   ..3.&..S Q..VP..-
E780:  01 83 C4 06 07 59 5B 3D  FF FF 74 14 43 49 8B 45   .....Y[= ..t.CI.E
E790:  02 0B C0 75 01 40 89 46  FC E9 7A FF 80 4C 0A 20   ...u.@.F ..z..L.
```

```
E7A0:  8B 46 FE 2B C1 8B E5 5D  C3 00 55 8B EC 83 EC 06   .F.+...] ..U.....
E7B0:  57 B8 5C 06 1E 50 E8 5D  03 83 C4 04 8B F8 8D 46   W.\..P.] .......F
E7C0:  0A 16 50 FF 76 08 FF 76  06 B8 5C 06 1E 50 9A 18   ..P.v..v ..\..P..
E7D0:  18 AF 0D 83 C4 0C 89 46  FA B8 5C 06 1E 50 57 E8   .......F ..\..PW.
E7E0:  B5 03 83 C4 06 8B 46 FA  5F 8B E5 5D CB 90 55 8B   ......F. _..]..U.
E7F0:  EC 83 EC 04 56 8D 46 0A  16 50 FF 76 08 FF 76 06   ....V.F. .P.v..v.
E800:  BE 50 06 1E 56 9A C4 0F  AF 0D 83 C4 0C 5E 8B E5   .P..V... .....^..
E810:  5D CB 55 8B EC 56 57 8B  76 06 8A 44 0A A8 83 74   ].U..VW. v..D...t
E820:  5F A8 40 75 5B A8 02 75  48 0C 01 88 44 0A 8B FE   _.@u[..u H...D...
E830:  81 EF 50 06 81 C7 40 07  A8 0C 75 0D F6 05 01 75   ..P...@. ..u....u
E840:  08 1E 56 E8 8C 01 83 C4  04 8B 44 06 89 04 FF 75   ..V..... ..D....u
E850:  02 FF 74 08 50 33 DB 8A  5C 0B 53 0E E8 DD 14 83   ..t.P3.. \.S.....
E860:  C4 08 0B C0 74 11 3D FF  FF 75 1A 80 4C 0A 20 EB   ....t.=. .u..L. .
E870:  0A 80 4C 0A 20 EB 09 80  4C 0A 10 C7 44 04 00 00   ..L. ... L...D...
E880:  B8 FF FF EB 25 8A BF FD  05 80 E7 82 80 FF 82 75   ....%... .......u
E890:  0B 8A 7C 0A F6 C7 82 75  03 80 0D 20 48 89 44 04   ..|....u ... H.D.
E8A0:  C4 1C 33 C0 26 8A 07 43  89 1C 5F 5E 5D CB 55 8B   ..3.&..C .._^].U.
E8B0:  EC 56 57 8B 76 08 8A 44  0A A8 82 74 6A A8 40 75   .VW.v..D ...tj.@u
E8C0:  66 C7 44 04 00 00 A8 01  74 0B A8 10 74 59 8B 4C   f.D..... t...tY.L
E8D0:  06 89 0C 24 FE 0C 02 24  EF 88 44 0A 8B FE 81 EF   ...$...$ ..D.....
E8E0:  50 06 81 C7 40 07 33 DB  8A 5C 0B A8 08 75 51 A8   P...@.3. .\...uQ.
E8F0:  04 75 1E F6 05 01 75 48  81 FE 5C 06 74 0C 81 FE   .u....uH ..\.t...
E900:  68 06 74 06 81 FE 80 06  75 26 F6 87 FD 05 40 74   h.t..... u&....@t
E910:  1F B9 01 00 51 16 8D 7E  06 57 53 0E E8 1B 15 83   ....Q..~ .WS.....
E920:  C4 08 B9 01 00 EB 46 B8  FF FF 80 4C 0A 20 EB 65   ......F. ...L. .e
E930:  53 1E 56 E8 9C 00 83 C4  04 5B F6 44 0A 08 74 D1   S.V..... .[.D..t.
E940:  8B 0C 8B 54 06 2B CA 42  89 14 8B 55 02 4A 89 54   ...T.+.B ...U.J.T
E950:  04 E3 25 51 51 FF 74 08  FF 74 06 53 0E E8 DA 14   ..%QQ.t. .t.S....
E960:  83 C4 08 59 C4 7C 06 8B  56 06 26 88 15 3B C1 75   ...Y.|.. V.&..;.u
E970:  B6 33 C0 8A 46 06 EB 1D  33 C0 F6 87 FD 05 20 74   .3..F... 3..... t
E980:  E3 B9 02 00 51 50 50 53  0E E8 6A 11 83 C4 08 33   ....QPPS ..j....3
E990:  C0 8B C8 EB CF 5F 5E 5D  CB 00 55 8B EC 56 8B 76   ....._^] ..U..V.v
E9A0:  04 8A 44 0A A8 83 74 26  A8 08 74 22 FF 74 08 FF   ..D...t& ..t".t..
E9B0:  74 06 9A C4 22 AF 0D 83  C4 04 80 64 0A F7 33 C0   t..."... ...d..3.
E9C0:  89 44 06 89 44 08 89 04  89 44 02 89 44 04 5E 5D   .D..D... .D..D.^]
E9D0:  C3 00 55 8B EC 56 8B 76  04 B8 00 02 50 9A BE 22   ..U..V.v ....P.."
E9E0:  AF 0D 59 8B DE 81 EB 50  06 81 C3 40 07 0B D2 74   ..Y....P ...@...t
E9F0:  0B 80 4C 0A 08 C7 47 02  00 02 EB 0E 80 4C 0A 04   ..L...G. .....L..
EA00:  C7 47 02 01 00 8C DA 8D  47 01 89 54 02 89 04 89   .G...... G..T....
EA10:  54 08 89 44 06 C7 44 04  00 00 5E 5D C3 00 55 8B   T..D..D. ..^]..U.
EA20:  EC 83 EC 08 57 56 C4 5E  0A 26 8A 07 98 3D 77 00   ....WV.^ .&...=w.
EA30:  74 48 77 08 2C 61 74 4C  2C 11 74 06 2B C0 99 E9   tHw.,atL ,.t.+...
EA40:  CD 00 2B F6 C6 46 FC 01  C7 46 FE 01 00 FF 46 0A   ..+..F.. .F....F.
EA50:  C4 5E 0A 26 80 3F 00 74  5B 83 7E FE 00 74 55 26   .^.&.?.t [.~..tU&
EA60:  8A 07 98 3D 74 00 74 34  77 08 2C 2B 74 1C 2C 37   ...=t.t4 w.,+t.,7
EA70:  74 36 C7 46 FE 00 00 EB  D4 90 BE 01 03 C6 46 FC   t6.F.... ......F.
EA80:  02 EB C5 90 BE 09 01 EB  F4 90 F7 C6 02 00 75 E2   ........ ......u.
EA90:  83 CE 02 83 E6 FE C6 46  FC 80 EB B1 F7 C6 00 C0   .......F ........
EAA0:  75 D0 81 CE 00 40 EB A5  F7 C6 00 C0 75 C4 81 CE   u....@.. ....u...
EAB0:  00 80 EB 99 B8 A4 01 50  FF 76 0E 56 FF 76 08 FF   .......P .v.V.v..
EAC0:  76 06 9A 80 1E AF 0D 83  C4 0A 89 46 FA 0B C0 7D   v....... ...F...}
EAD0:  03 E9 68 FF FF 06 4E 06  8B 7E 10 8B C7 2D 50 06   ..h...N. .~...-P.
EAE0:  05 40 07 89 46 F8 8A 46  FC 88 45 0A 8B 5E F8 C6   .@..F..F ..E..^..
```

```
EAF0:  07 00 2B C0 89 45 04 89  47 04 89 45 02 89 05 89   ..+..E.. G..E....
EB00:  45 08 89 45 06 8A 46 FA  88 45 0B 8B C7 8C DA 5E   E..E..F. .E.....^
EB10:  5F 8B E5 5D CB 90 55 8B  EC 56 57 8B 76 04 BB 34   _..]..U. .VW.v..4
EB20:  08 81 FE 5C 06 74 12 BB  38 08 81 FE 68 06 74 09   ...\.t.. 8...h.t.
EB30:  BB 3C 08 81 FE 80 06 75  58 8B FE 81 EF 50 06 81   .<.....u X....P..
EB40:  C7 40 07 F6 44 0A 0C 75  48 F6 05 01 75 43 8B 07   .@..D..u H...uC..
EB50:  8B 57 02 8B C8 0B CA 74  21 89 44 06 89 54 08 89   .W.....t !.D..T..
EB60:  04 89 54 02 C7 44 04 00  02 C7 45 02 00 02 80 4C   ..T..D.. ..E....L
EB70:  0A 02 C6 05 11 B8 01 00  EB 19 53 B8 00 02 50 9A   ........ ..S...P.
EB80:  BE 22 AF 0D 5B 5B 0B D2  74 07 89 07 89 57 02 EB   ."..[[.. t....W..
EB90:  C8 33 C0 5F 5E 5D C3 55  8B EC 56 57 8B 76 06 8B   .3._^].U ..VW.v..
EBA0:  FE 81 EF 50 06 81 C7 40  07 F6 05 10 74 2D 33 DB   ...P...@ ....t-3.
EBB0:  8A 5C 0B F6 87 FD 05 40  74 21 1E 56 0E E8 20 00   .\.....@ t!.V.. .
EBC0:  83 C4 04 83 7E 04 00 74  12 33 C0 88 05 89 45 02   ....~..t .3....E.
EBD0:  89 04 89 44 02 89 44 06  89 44 08 5F 5E 5D C3 00   ...D..D. .D._^]..
EBE0:  55 8B EC 83 EC 02 57 56  2B FF 8B 46 08 0B 46 06   U.....WV +..F..F.
EBF0:  75 08 2B C0 50 E8 70 00  EB 5F 8B 76 06 8A 44 0A   u.+.P.p. ._.v..D.
EC00:  8B C8 24 03 3C 02 75 3F  F6 C1 08 75 0D 8B DE 81   ..$.<.u? ...u....
EC10:  EB 50 06 F6 87 40 07 01  74 2D 8B 04 2B 44 06 89   .P...@.. t-..+D..
EC20:  46 FE 0B C0 7E 21 50 FF  74 08 FF 74 06 8A 4C 0B   F...~!P. t..t..L.
EC30:  2A ED 51 9A 4A 21 AF 0D  83 C4 08 39 46 FE 74 07   *.Q.J!.. ...9F.t.
EC40:  80 4C 0A 20 BF FF FF 8B  44 06 8B 54 08 89 04 89   .L. .... D..T....
EC50:  54 02 C7 44 04 00 00 8B  C7 5E 5F 8B E5 5D CB 90   T..D.... .^_..]..
EC60:  B8 01 00 50 E8 01 00 CB  55 8B EC 83 EC 02 57 56   ...P.... U.....WV
EC70:  BE 50 06 2B FF 89 7E FE  EB 08 C7 46 FE FF FF 83   .P.+..~. ...F....
EC80:  C6 0C 39 36 30 08 72 16  F6 44 0A 83 74 F1 1E 56   ..960.r. .D..t..V
EC90:  9A F0 0E AF 0D 83 C4 04  40 74 DF 47 EB E1 83 7E   ........ @t.G...~
ECA0:  04 01 75 04 8B C7 EB 03  8B 46 FE 5E 5F 8B E5 5D   ..u..... .F.^_..]
ECB0:  C2 02 00 90 55 8B EC B8  B4 01 9A C6 02 AF 0D 57   ....U... .......W
ECC0:  56 C6 46 B8 00 2B C0 89  46 E8 89 46 C6 C4 5E 0A   V.F..+.. F..F..^.
ECD0:  26 80 3F 00 75 03 E9 6F  07 26 8A 1F 2A FF F6 87   &.?.u..o .&..*...
ECE0:  DB 08 08 74 2D FF 4E E8  8D 46 E8 16 50 FF 76 08   ...t-.N. .F..P.v.
ECF0:  FF 76 06 E8 DE 07 50 FF  76 08 FF 76 06 E8 B6 07   .v....P. v..v....
ED00:  FF 46 0A C4 5E 0A 26 8A  1F 2A FF F6 87 DB 08 08   .F..^.&. .*......
ED10:  75 EE 8B 5E 0A 26 80 3F  25 74 03 E9 02 07 C6 46   u..^.&.? %t.....F
ED20:  C0 00 2A C0 88 46 FC 88  46 B6 88 46 F2 88 46 F6   ..*..F.. F..F..F.
ED30:  88 46 EE 88 86 52 FE 2B  C0 89 46 EA 89 46 BA 89   .F...R.+ ..F..F..
ED40:  46 FE 89 46 C4 89 46 C2  EB 68 90 90 FF 46 0A C4   F..F..F. .h...F..
ED50:  5E 0A 26 8A 07 2A E4 8B  F8 F6 85 DB 08 04 74 1A   ^.&..*.. ......t.
ED60:  FF 46 BA 8B 46 FE 8B C8  D1 E0 D1 E0 03 C1 D1 E0   .F..F... ........
ED70:  03 C7 2D 30 00 89 46 FE  EB 38 3D 6C 00 74 1C 77   ..-0..F. .8=l.t.w
ED80:  2D 3C 4C 74 13 7F 1F 2C  2A 74 15 2C 1C 74 23 EB   -<Lt..., *t.,.t#.
ED90:  1D 90 FE 46 FC EB 1B 90  FE 46 F6 FE 46 F6 EB 12   ...F.... .F..F...
EDA0:  FE 46 EE EB 0D 90 2C 4E  74 08 2C 1A 74 E4 FE 86   .F....,N t.,.t...
EDB0:  52 FE 80 BE 52 FE 00 74  93 80 7E EE 00 75 14 C4   R...R..t ..~..u..
EDC0:  5E 0E 83 46 0E 04 26 8B  07 26 8B 57 02 89 46 F8   ^..F..&. .&.W..F.
EDD0:  89 56 FA C6 86 52 FE 00  C4 5E 0A 26 8A 07 0C 20   .V...R.. .^.&...
EDE0:  2A E4 8B F8 83 FF 6E 74  29 83 FF 63 74 16 83 FF   *.....nt )..ct...
EDF0:  7B 74 11 8D 46 E8 16 50  FF 76 08 FF 76 06 E8 D3   {t..F..P .v..v...
EE00:  06 EB 0D 90 FF 46 E8 FF  76 08 FF 76 06 E8 74 06   .....F.. v..v..t.
EE10:  8B F0 83 7E BA 00 74 09  83 7E FE 00 75 03 E9 93   ...~..t. .~..u...
EE20:  05 8B C7 E9 B0 05 83 7E  BA 00 75 06 FF 46 BA FF   .......~ ..u..F..
EE30:  46 FE C7 46 BC 46 08 8C  5E BE EB 23 C7 46 BC 40   F..F.F.. ^..#.F.@
```

```
EE40:  08 EB F4 90 FF 46 0A C4  5E 0A 89 5E BC 8C 46 BE   .....F.. ^..^..F.
EE50:  26 80 3F 5E 75 0C 8D 47  01 89 46 BC 8C 46 BE FE   &.?^u..G ..F..F..
EE60:  4E B6 B8 20 00 50 2B C0  50 8D 46 C8 16 50 9A 86   N.. .P+. P.F..P..
EE70:  2B AF 0D 83 C4 08 83 FF  7B 74 03 E9 B3 00 C4 5E   +....... {t.....^
EE80:  BC 26 80 3F 5D 74 03 E9  A7 00 C6 46 C0 5D FF 46   .&.?]t.. ...F.].F
EE90:  BC C6 46 D3 20 E9 99 00  26 8A 07 88 46 F4 FF 46   ..F. ... &...F..F
EEA0:  BC 3C 2D 75 0F 80 7E C0  00 74 09 8B 5E BC 26 80   .<-u..~. .t..^.&.
EEB0:  3F 5D 75 24 8A 5E F4 88  5E C0 B0 01 8A CB 80 E1   ?]u$.^.. ^.......
EEC0:  07 8B D1 8A CA D2 E0 B1  03 D2 EB 2A FF 8D 4E C8   ........ ...*..N.
EED0:  03 D9 36 08 07 EB 5A 90  FF 46 BC 26 8A 07 88 46   ..6...Z. .F.&...F
EEE0:  F4 3A 46 C0 76 06 88 46  F0 EB 0D 90 8A 46 C0 88   .:F.v..F .....F..
EEF0:  46 F0 8A 46 F4 88 46 C0  8A 46 C0 88 46 F4 EB 21   F..F..F. .F..F..!
EF00:  8A 5E F4 B0 01 8A CB 80  E1 07 8B D1 8A CA D2 E0   .^...... ........
EF10:  B1 03 D2 EB 2A FF 8D 4E  C8 03 D9 36 08 07 FE 46   ....*..N ...6...F
EF20:  F4 8A 46 F0 98 8A 4E F4  2A ED 3B C1 7D D2 88 6E   ..F...N. *.;.}..n
EF30:  C0 C4 5E BC 26 80 3F 5D  74 03 E9 5B FF 26 80 3F   ..^.&.?] t..[.&.?
EF40:  00 75 03 E9 02 05 83 FF  7B 75 0A 8B C3 8C C2 89   .u...... {u......
EF50:  46 0A 89 56 0C 8B 46 F8  8B 56 FA 89 86 54 FE 89   F..V..F. .V...T..
EF60:  96 56 FE 83 7E BA 00 74  0A 8B 46 FE FF 4E FE 0B   .V..~..t ..F..N..
EF70:  C0 74 4F 83 FE FF 74 4A  8B DE B1 03 D3 FB 8D 46   .tO...tJ .......F
EF80:  C8 03 D8 36 8A 07 32 46  B6 98 BA 01 00 8B CE 8B   ...6..2F ........
EF90:  D9 80 E1 07 D3 E2 85 C2  74 28 80 7E EE 00 75 0E   ........ t(.~..u.
EFA0:  8B C6 C4 5E F8 FF 46 F8  26 88 07 EB 05 90 FF 86   ...^..F. &.......
EFB0:  54 FE FF 46 E8 FF 76 08  FF 76 06 E8 C6 04 8B F0   T..F..v. .v......
EFC0:  EB A1 FF 4E E8 56 FF 76  08 FF 76 06 E8 E7 04 8B   ...N.V.v ..v.....
EFD0:  46 F8 8B 56 FA 39 86 54  FE 75 09 39 96 56 FE 75   F..V.9.T .u.9.V.u
EFE0:  03 E9 64 04 80 7E EE 00  74 03 E9 2B 04 FF 46 C6   ..d..~.. t..+..F.
EFF0:  83 FF 63 75 03 E9 20 04  8E C2 8B D8 26 C6 07 00   ..cu.. . ....&...
F000:  E9 15 04 90 BF 64 00 83  FE 2D 75 06 FE 46 F2 EB   .....d.. .-u..F..
F010:  06 90 83 FE 2B 75 1F FF  4E FE 75 0C 83 7E BA 00   ....+u.. N.u..~..
F020:  74 06 FE 86 52 FE EB 0E  FF 46 E8 FF 76 08 FF 76   t...R... .F..v..v
F030:  06 E8 50 04 8B F0 83 FE  30 74 03 E9 57 01 FF 46   ..P..... 0t..W..F
F040:  E8 FF 76 08 FF 76 06 E8  3A 04 8B F0 3C 78 74 04   ..v..v.. :...<xt.
F050:  3C 58 75 14 FF 46 E8 FF  76 08 FF 76 06 E8 24 04   <Xu..F.. v..v..$.
F060:  8B F0 BF 78 00 E9 2D 01  FF 46 EA 83 FF 78 74 06   ...x..-. .F...xt.
F070:  BF 6F 00 E9 1F 01 FF 4E  E8 56 FF 76 08 FF 76 06   .o.....N .V.v..v.
F080:  E8 33 04 BE 30 00 E9 0C  01 90 80 7E FC 00 75 06   .3..0... ...~..u.
F090:  FE 46 F6 BF 46 00 83 FE  2D 75 05 FE 46 F2 EB 08   .F..F... -u..F...
F0A0:  83 FE 2B 74 03 E9 ED 00  FF 4E FE 74 03 E9 95 00   ..+t.... .N.t....
F0B0:  83 7E BA 00 75 03 E9 8C  00 FE 86 52 FE E9 D5 00   .~..u... ...R....
F0C0:  83 FF 78 74 0D 83 FF 70  74 08 83 FF 46 74 03 E9   ..xt...p t...Ft..
F0D0:  84 00 F6 84 DB 08 80 74  15 B0 04 50 8D 46 C2 16   .......t ...P.F..
F0E0:  50 9A A4 2C AF 0D 56 E8  7C 03 8B F0 EB 35 83 FF   P..,..V. |....5..
F0F0:  46 75 2C 83 7E EA 00 74  26 83 FE 3A 75 1C 8B 46   Fu,.~..t &..:u..F
F100:  C2 89 46 EC 2B C0 89 46  C4 89 46 C2 C7 46 EA FF   ..F.+..F ..F..F..
F110:  FF BF 70 00 BE 30 00 EB  0A 90 C7 46 EA 00 00 FE   ..p..0.. ...F....
F120:  86 52 FE 80 BE 52 FE 00  75 5E FF 46 EA 8D 44 D0   .R...R.. u^.F..D.
F130:  99 01 46 C2 11 56 C4 83  7E BA 00 74 08 FF 4E FE   ..F..V.. ~..t..N.
F140:  75 03 E9 74 FF FF 46 E8  FF 76 08 FF 76 06 E8 33   u..t..F. .v..v..3
F150:  03 8B F0 EB 40 90 F6 84  DB 08 04 74 C2 83 FF 6F   ....@... ...t...o
F160:  75 14 83 FE 38 7D B8 B0  03 50 8D 46 C2 16 50 9A   u...8}.. .P.F..P.
F170:  A4 2C AF 0D EB AD B8 0A  00 99 52 50 8D 46 C2 16   .,...... ..RP.F..
F180:  50 9A 82 2C AF 0D EB 9B  FF 4E E8 56 FF 76 08 FF   P..,.... .N.V.v..
```

```
F190:  76 06 E8 21 03 80 BE 52  FE 00 75 03 E9 21 FF 83   v..!...R ..u..!..
F1A0:  FF 70 75 0F 80 7E F6 00  74 09 8B 46 EC 8B 4E C2   .pu..~.. t..F..N.
F1B0:  89 46 C4 80 7E F2 00 74  0A F7 5E C2 83 56 C4 00   .F..~..t ..^..V..
F1C0:  F7 5E C4 83 FF 46 75 05  C7 46 EA 00 00 83 7E EA   .^...Fu. .F....~.
F1D0:  00 75 03 E9 72 02 80 7E  EE 00 74 03 E9 39 02 FF   .u..r..~ ..t..9..
F1E0:  46 C6 80 7E F6 00 74 14  8B 46 C2 8B 56 C4 C4 5E   F..~..t. .F..V..^
F1F0:  F8 26 89 07 26 89 57 02  E9 1D 02 90 8B 46 C2 C4   .&..&.W. .....F..
F200:  5E F8 26 89 07 E9 10 02  8B 46 E8 99 89 46 C2 89   ^.&..... .F...F..
F210:  56 C4 EB CE 8D 86 58 FE  89 46 BC 8C 56 BE 83 FE   V.....X. .F..V...
F220:  2D 75 13 8B D8 36 C6 07  2D 8D 86 59 FE 89 46 BC   -u...6.. -..Y..F.
F230:  8C 56 BE EB 06 90 83 FE  2B 75 11 FF 4E FE FF 46   .V...... +u..N..F
F240:  E8 FF 76 08 FF 76 06 E8  3A 02 8B F0 83 7E BA 00   ..v..v.. :....~..
F250:  74 07 81 7E FE 5D 01 7E  2D C7 46 FE 5D 01 EB 26   t..~.].~ -.F.]..&
F260:  8B 46 FE FF 4E FE 0B C0  74 23 FF 46 EA 8B C6 C4   .F..N... t#.F....
F270:  5E BC FF 46 BC 26 88 07  FF 46 E8 FF 76 08 FF 76   ^..F.&.. .F..v..v
F280:  06 E8 00 02 8B F0 F6 84  DB 08 04 75 D3 83 FE 2E   ........ ...u....
F290:  75 43 8B 46 FE FF 4E FE  0B C0 74 39 C4 5E BC FF   uC.F..N. ..t9.^..
F2A0:  46 BC 26 C6 07 2E EB 18  8B 46 FE FF 4E FE 0B C0   F.&..... .F..N...
F2B0:  74 23 FF 46 EA 8B C6 C4  5E BC FF 46 BC 26 88 07   t#.F.... ^..F.&..
F2C0:  FF 46 E8 FF 76 08 FF 76  06 E8 B8 01 8B F0 F6 84   .F..v..v ........
F2D0:  DB 08 04 75 D3 83 7E EA  00 75 03 E9 81 00 8B C6   ...u..~. .u......
F2E0:  3C 65 74 04 3C 45 75 77  8B 46 FE FF 4E FE 0B C0   <et.<Euw .F..N...
F2F0:  74 6D C4 5E BC FF 46 BC  26 C6 07 65 FF 46 E8 FF   tm.^..F. &..e.F..
F300:  76 08 FF 76 06 E8 7C 01  8B F0 83 FE 2D 75 0F C4   v..v..|. ....-u..
F310:  5E BC FF 46 BC 26 C6 07  2D EB 08 90 90 90 83 FE   ^..F.&.. -.......
F320:  2B 75 35 8B 46 FE FF 4E  FE 0B C0 75 1D FF 46 FE   +u5.F..N ...u..F.
F330:  EB 26 8B 46 FE FF 4E FE  0B C0 74 23 FF 46 EA 8B   .&.F..N. ..t#.F..
F340:  C6 C4 5E BC FF 46 BC 26  88 07 FF 46 E8 FF 76 08   ..^..F.& ...F..v.
F350:  FF 76 06 E8 2E 01 8B F0  F6 84 DB 08 04 75 D3 FF   .v...... .....u..
F360:  4E E8 56 FF 76 08 FF 76  06 E8 4A 01 83 7E EA 00   N.V.v..v ..J..~..
F370:  75 03 E9 D3 00 80 7E EE  00 74 03 E9 9A 00 FF 46   u.....~. .t.....F
F380:  C6 C4 5E BC 26 C6 07 00  8D 86 58 FE 16 50 FF 76   ..^.&... ..X..P.v
F390:  FA FF 76 F8 8A 46 F6 98  50 8E 06 86 0B 26 FF 1E   ..v..F.. P....&..
F3A0:  C4 08 83 C4 0A EB 71 90  C4 5E 0A 26 8A 07 2A E4   ......q. .^.&..*.
F3B0:  3B C6 74 12 FF 4E E8 56  FF 76 08 FF 76 06 E8 F5   ;.t..N.V .v..v...
F3C0:  00 E9 84 00 90 90 FE 4E  B8 80 7E EE 00 75 49 83   .......N ..~..uI.
F3D0:  6E 0E 04 EB 43 90 2D 63  00 3D 18 00 77 CA D1 E0   n...C.-c .=..w...
F3E0:  93 2E FF A7 F6 16 36 11  A6 13 24 15 24 15 24 15   ......6. ..$.$.$.
F3F0:  B8 16 14 13 B8 16 B8 16  B8 16 B8 16 18 15 A6 13   ........ ........
F400:  9A 13 B8 16 B8 16 4C 11  B8 16 A6 13 B8 16 B8 16   ......L. ........
F410:  17 13 B8 16 B8 16 54 11  FE 46 B8 FF 46 0A EB 20   ......T. .F..F..
F420:  FF 46 E8 FF 76 08 FF 76  06 E8 58 00 8B F0 C4 5E   .F..v..v ..X....^
F430:  0A FF 46 0A 26 8A 07 2A  E4 3B F0 74 03 E9 74 FF   ..F.&..* .;.t..t.
F440:  83 FE FF 74 03 E9 85 F8  83 FE FF 75 0C 83 7E C6   ...t.... ...u..~.
F450:  00 75 06 80 7E B8 00 74  05 8B 46 C6 EB 02 8B C6   .u..~..t ..F.....
F460:  5E 5F 8B E5 5D CB 55 8B  EC 8B 5E 04 F6 87 DB 08   ^_..].U. ..^.....
F470:  04 74 05 8B C3 EB 08 90  8B C3 24 DF 2D 07 00 5D   .t...... ..$.-..]
F480:  C2 02 00 90 55 8B EC 83  EC 04 C4 5E 04 26 FF 4F   ....U... ...^.&.O
F490:  04 78 15 26 8B 07 26 8B  57 02 26 FF 07 8B D8 8E   .x.&..&. W.&.....
F4A0:  C2 26 8A 07 2A E4 EB 07  06 53 9A 22 0B AF 0D 8B   .&..*... .S."....
F4B0:  E5 5D C2 04 00 90 55 8B  EC 83 7E 08 FF 74 0E FF   .]....U. ..~..t..
F4C0:  76 06 FF 76 04 FF 76 08  9A 7A 1D AF 0D 8B E5 5D   v..v..v. .z.....]
F4D0:  C2 06 00 90 55 8B EC 56  C4 5E 08 26 FF 07 FF 76   ....U..V .^.&...v
```

```
F4E0:  06 FF 76 04 E8 9D FF 8B  F0 F6 84 DB 08 08 75 E8   ..v..... ......u.
F4F0:  5E 8B E5 5D C2 08 00 90  70 18 7B 18 91 18 C5 18   ^..].... p.{.....
F500:  F1 18 F9 18 22 19 54 19  55 8B EC B8 71 01 0E E8   ....".T. U...q...
F510:  A4 EA 56 57 33 C0 89 46  F8 88 46 FB C4 76 0A 26   ..VW3..F ..F..v.&
F520:  AC 89 76 0A 88 46 FE 0A  C0 74 06 83 7E F8 00 7D   ..v..F.. .t..~..}
F530:  06 8B 46 F8 E9 B5 04 BB  48 08 2C 20 3C 58 77 05   ..F..... H., <Xw.
F540:  D7 24 0F EB 02 B0 00 B1  03 D2 E0 02 46 FB D7 FE   .$...... ....F...
F550:  C1 D2 E8 88 46 FB 98 8B  D8 D1 E3 2E FF A7 08 18   ....F... ........
F560:  8A 56 FE B9 01 00 E8 36  04 EB B1 33 C0 89 46 F0   .V.....6 ...3..F.
F570:  89 46 F6 89 46 EE C7 46  FC 20 00 48 89 46 F4 EB   .F..F..F . .H.F..
F580:  9B 8A 46 FE 3C 2D 75 06  80 4E FC 04 EB 8E 3C 2B   ..F.<-u. .N....<+
F590:  75 06 80 4E FC 01 EB 84  3C 20 75 07 80 4E FC 02   u..N.... < u..N..
F5A0:  E9 79 FF 3C 23 75 07 80  4E FC 80 E9 6E FF 80 4E   .y.<#u.. N...n..N
F5B0:  FC 08 E9 67 FF 8A 4E FE  80 F9 2A 75 0F E8 5C 03   ...g..N. ..*u..\.
F5C0:  0B C0 79 17 F7 D8 80 4E  FC 04 EB 0F 80 E9 30 32   ..y....N ......02
F5D0:  ED 8B 46 F6 BB 0A 00 F7  E3 03 C1 89 46 F6 E9 3B   ..F..... ....F..;
F5E0:  FF C7 46 F4 00 00 E9 33  FF 8A 4E FE 80 F9 2A 75   ..F....3 ..N...*u
F5F0:  0C E8 28 03 0B C0 79 14  B8 FF FF EB 0F 80 E9 30   ..(...y. .......0
F600:  32 ED 8B 46 F4 BB 0A 00  F7 E3 03 C1 89 46 F4 E9   2..F.... .....F..
F610:  0A FF 8A 46 FE 3C 6C 75  06 80 4E FC 10 EB 22 3C   ...F.<lu ..N..."<
F620:  46 75 06 80 4E FC 20 EB  18 3C 4E 75 06 80 4E FD   Fu..N. . .<Nu..N.
F630:  10 EB 0E 3C 4C 75 06 80  4E FD 04 EB 04 80 4E FD   ...<Lu.. N.....N.
F640:  08 E9 D8 FE 8A 46 FE 3C  64 75 03 E9 94 01 3C 69   .....F.< du....<i
F650:  75 03 E9 8D 01 3C 75 75  03 E9 8A 01 3C 58 75 03   u....<uu ....<Xu.
F660:  E9 89 01 3C 78 75 03 E9  88 01 3C 6F 75 03 E9 A2   ...<xu.. ..<ou...
F670:  01 3C 63 74 1A 3C 73 74  27 3C 6E 74 51 3C 70 74   .<ct.<st '<ntQ<pt
F680:  60 3C 45 74 07 3C 47 74  03 E9 BB 00 E9 B5 00 E8   `<Et.<Gt ........
F690:  8A 02 8D BE 8F FE 16 07  AA 4F B9 01 00 E9 F1 01   ........ .O......
F6A0:  E8 90 02 0B FF 75 12 8C  C0 0B C0 75 0C 1E 07 BF   .....u.. ...u....
F6B0:  A1 08 8B 0E A7 08 E9 D8  01 57 8B 4E F4 E3 07 32   ........ .W.N...2
F6C0:  C0 F2 AE 75 01 4F 59 2B  F9 87 CF E9 C3 01 E8 62   ...u.OY+ .......b
F6D0:  02 8B 46 F8 AB F6 46 FC  10 74 03 33 C0 AB E9 3B   ..F...F. .t.3...;
F6E0:  FE F6 46 FC 30 75 05 E8  32 02 EB 39 E8 36 02 F6   ..F.0u.. 2..9.6..
F6F0:  46 FD 18 75 30 C6 46 FF  07 B9 10 00 16 07 52 33   F..u0.F. ......R3
F700:  D2 8D BE 97 FE BE 04 00  E8 B0 02 B9 10 00 8D BE   ........ ........
F710:  92 FE 58 33 D2 BE 04 00  E8 A0 02 C6 86 93 FE 3A   ..X3.... .......:
F720:  B9 09 00 EB 18 C6 46 FF  07 B9 10 00 16 07 33 D2   ......F. ......3.
F730:  8D BE 92 FE BE 04 00 E8  81 02 B9 04 00 8D BE 8F   ........ ........
F740:  FE E9 4D 01 FF 46 EE 80  4E FC 40 8A 46 FE 0C 20   ..M..F.. N.@.F..
F750:  98 8B F0 83 7E F4 00 7F  13 74 07 C7 46 F4 06 00   ....~... .t..F...
F760:  EB 0A 3D 67 00 75 05 C7  46 F4 01 00 8D BE 8F FE   ..=g.u.. F.......
F770:  FF 76 EE FF 76 F4 56 16  57 FF 76 10 FF 76 0E F6   .v..v.V. W.v..v..
F780:  46 FD 04 74 0A FF 1E D0  08 83 46 0E 0A EB 08 FF   F..t.... ..F.....
F790:  1E BC 08 83 46 0E 08 83  C4 0E F6 46 FC 80 74 0F   ....F... ...F..t.
F7A0:  83 7E F4 00 75 09 16 57  FF 1E C8 08 83 C4 04 83   .~..u..W ........
F7B0:  FE 67 75 10 F7 46 FC 80  00 75 09 16 57 FF 1E C0   .gu..F.. .u..W...
F7C0:  08 83 C4 04 16 07 26 80  3D 2D 75 05 47 80 4E FD   ......&. =-u.G.N.
F7D0:  01 B9 FF FF 57 B0 00 F2  AE 4F 59 2B F9 87 CF E9   ....W... .OY+....
F7E0:  AF 00 80 4E FC 40 C6 46  FA 0A EB 35 C6 46 FF 07   ...N.@.F ...5.F..
F7F0:  EB 04 C6 46 FF 27 F6 46  FC 80 74 11 C7 46 F0 02   ...F.'.F ..t..F..
F800:  00 C6 46 F2 30 B2 51 02  56 FF 88 56 F3 C6 46 FA   ..F.0.Q. V..V..F.
F810:  10 EB 0E F6 46 FC 80 74  04 80 4E FD 02 C6 46 FA   ....F..t ..N...F.
F820:  08 F6 46 FC 10 74 05 E8  FB 00 EB 0E E8 ED 00 F6   ..F..t.. ........
```

```
F830: 46 FC 40 74 03 99 EB 02  33 D2 F6 46 FC 40 74 0F   F.@t.... 3..F.@t.
F840: 0B D2 7D 0B 80 4E FD 01  F7 D8 83 D2 00 F7 DA 83   ..}..N.. ........
F850: 7E F4 00 7D 07 C7 46 F4  01 00 EB 04 80 66 FC F7   ~..}..F. .....f..
F860: 8B D8 0B DA 75 05 C7 46  F0 00 00 8D 7E EB 16 07   ....u..F ....~...
F870: 8A 4E FA 32 ED 8B 76 F4  E8 40 01 F6 46 FD 02 74   .N.2..v. .@..F..t
F880: 0E E3 06 26 80 3D 30 74  06 4F 26 C6 05 30 41 EB   ...&.=0t .O&..0A.
F890: 00 F6 46 FC 40 74 31 F6  46 FD 01 74 0B C6 46 F2   ..F.@t1. F..t..F.
F8A0: 2D C7 46 F0 01 00 EB 20  F6 46 FC 01 74 0B C6 46   -.F....  .F..t..F
F8B0: F2 2B C7 46 F0 01 00 EB  0F F6 46 FC 02 74 09 C6   .+.F.... ..F..t..
F8C0: 46 F2 20 C7 46 F0 01 00  8B 46 F6 2B C1 2B 46 F0   F. .F... .F.+.+F.
F8D0: 7D 02 33 C0 06 57 51 F6  46 FC 0C 75 07 8B C8 B2   }.3..WQ. F..u....
F8E0: 20 E8 BB 00 50 16 07 8D  7E F2 8B 4E F0 E8 91 00    ...P... ~..N....
F8F0: 58 F6 46 FC 08 74 0D F6  46 FC 04 75 07 8B C8 B2   X.F..t.. F..u....
F900: 30 E8 9B 00 59 5F 07 50  E8 76 00 58 F6 46 FC 04   0...Y_.P .v.X.F..
F910: 74 07 8B C8 B2 20 E8 86  00 E9 00 FC C4 76 0E 26   t.... .. .....v.&
F920: AD 89 76 0E C3 C4 76 0E  26 AD 8B D0 26 AD 92 89   ..v...v. &...&...
F930: 76 0E C3 F6 46 FC 20 74  08 E8 E9 FF 8E C2 8B F8   v...F. t ........
F940: C3 E8 D8 FF 8B F8 0B C0  75 03 8E C0 C3 1E 07 C3   ........ u.......
F950: 98 06 57 C4 5E 06 26 FF  4F 04 78 10 26 8B 3F 26   ..W.^.&. O.x.&.?&
F960: FF 07 26 8E 47 02 AA 33  C0 5F 07 C3 51 52 06 53   ..&.G..3 ._..QR.S
F970: 50 0E E8 39 EF 83 C4 06  5A 59 3D FF FF 75 E8 EB   P..9.... ZY=..u..
F980: E8 E3 1B 8B F7 01 4E F8  57 33 FF 26 AC E8 C0 FF   ......N. W3.&....
F990: 0B F8 E2 F7 0B FF 5F 74  05 C7 46 F8 FF FF C3 E3   ......_t ..F.....
F9A0: 19 01 4E F8 57 33 FF 8A  C2 E8 A4 FF 0B F8 E2 F7   ..N.W3.. ........
F9B0: 0B FF 5F 74 05 C7 46 F8  FF FF C3 FD 57 93 0B F6   .._t..F. ....W...
F9C0: 7F 0A 0B DB 75 06 0B D2  75 02 EB 1A 92 33 D2 F7   ....u... u....3..
F9D0: F1 93 F7 F1 92 87 D3 04  30 3C 39 76 03 02 46 FF   ........ 0<9v..F.
F9E0: AA 8B C2 4E EB D8 59 2B  CF 47 FC C3 5F 5E 8B E5   ...N..Y+ .G.._^..
F9F0: 5D CB 55 8B EC 83 EC 04  56 BE 50 06 2B C0 89 46   ].U..... V.P.+..F
FA00: FE 89 46 FC EB 03 83 C6  0C 39 36 30 08 72 26 F6   ..F..... .960.r&.
FA10: 44 0A 83 75 F1 C7 44 04  00 00 C6 44 0A 00 2B C0   D..u..D. ...D..+.
FA20: 89 44 08 89 44 06 89 44  02 89 04 C6 44 0B FF 89   .D..D..D ....D...
FA30: 76 FC 8C 5E FE 8B 46 FC  8B 56 FE 5E 8B E5 5D CB   v..^..F. .V.^..].
FA40: 55 8B EC BB 50 06 EB 06  55 8B EC 8B 5E 06 FF 4F   U...P... U...^..O
FA50: 04 78 0C FF 07 C4 1F 26  8A 47 FF 32 E4 EB 08 1E   .x.....& .G.2....
FA60: 53 0E E8 AD ED 5B 5B 5D  CB 00 55 8B EC 57 56 8B   S....[[] ..U..WV.
FA70: 76 06 8B 7E 08 83 FE FF  74 12 F6 45 0A 01 75 12   v..~.... t..E..u.
FA80: F6 45 0A 80 74 06 F6 45  0A 02 74 06 B8 FF FF EB   .E..t..E ..t.....
FA90: 3E 90 8B 45 08 0B 45 06  75 08 1E 57 E8 33 EF 83   >..E..E. u..W.3..
FAA0: C4 04 8B 05 8B 55 02 39  45 06 75 0D 39 55 08 75   .....U.9 E.u.9U.u
FAB0: 08 83 7D 04 00 75 D5 FF  05 FF 45 04 8B C6 FF 0D   ..}..u.. ..E.....
FAC0: C4 1D 26 88 07 80 65 0A  EF 80 4D 0A 01 2A E4 5E   ..&...e. ..M..*.^
FAD0: 5F 8B E5 5D CB 90 55 8B  EC 8B 5E 06 3B 1E FB 05   _..]..U. ..^.;...
FAE0: 72 06 B8 00 09 F9 EB 0B  B4 3E CD 21 72 05 C6 87   r....... .>.!r...
FAF0: FD 05 00 E9 DE E7 55 8B  EC 83 EC 04 8B 5E 06 3B   ......U. .....^.;
FB00: 1E FB 05 72 05 B8 00 09  EB 2A F7 46 0A 00 80 74   ...r.... .*.F...t
FB10: 48 83 7E 0C 00 74 1A 33  C9 8B D1 B8 01 42 CD 21   H.~..t.3 .....B.!
FB20: 72 4B F7 46 0C 02 00 75  0E 03 46 08 13 56 0A 79   rK.F...u ..F..V.y
FB30: 28 B8 00 16 F9 EB 36 89  56 FE 89 46 FC 8B D1 B8   (.....6. V..F....
FB40: 02 42 CD 21 03 46 08 13  56 0A 79 0D 8B 4E FE 8B   .B.!.F.. V.y..N..
FB50: 56 FC B8 00 42 CD 21 EB  D8 8B 56 08 8B 4E 0A 8A   V...B.!. ..V..N..
FB60: 46 0C B4 42 CD 21 72 05  80 A7 FD 05 FD E9 79 E7   F..B.!r. ......y.
FB70: 55 8B EC 83 EC 04 32 FF  80 3E F6 05 03 72 03 8A   U.....2. .>...r..
```

```
FB80:  7E 0C 8B 46 0E 89 46 0C  EB 08 55 8B EC 83 EC 04   ~..F..F. ..U.....
FB90:  32 FF 88 7E FE 8B 46 0A  8B C8 C6 46 FC 00 A9 00   2..~..F. ...F....
FBA0:  80 75 10 A9 00 40 75 07  F6 06 AB 08 80 75 04 C6   .u...@u. .....u..
FBB0:  46 FC 80 1E C5 56 06 24  03 0A C7 B4 3D CD 21 1F   F....V.$ ....=.!.
FBC0:  73 12 3D 02 00 75 09 F7  C1 00 01 74 03 E9 A5 00   s.=..u.. ...t....
FBD0:  F9 E9 15 E7 93 8B C1 25  00 05 3D 00 05 75 09 B4   .......% ..=..u..
FBE0:  3E CD 21 B8 00 11 EB E8  C6 46 FD 01 B8 00 44 CD   >.!..... .F....D.
FBF0:  21 F6 C2 80 74 04 80 4E  FC 40 F6 46 FC 40 74 03   !...t..N .@.F.@t.
FC00:  E9 DF 00 8B 46 0A A9 00  02 74 1E A9 03 00 74 09   ....F... .t....t.
FC10:  33 C9 B4 40 CD 21 E9 C9  00 B4 3E CD 21 1E C5 56   3..@.!.. ..>.!..V
FC20:  06 B8 00 43 CD 21 1F EB  69 F6 46 FC 80 75 03 E9   ...C.!.. i.F..u..
FC30:  B0 00 A9 02 00 75 03 E9  A8 00 B9 FF FF 8B D1 B8   .....u.. ........
FC40:  02 42 CD 21 F7 D9 1E 16  1F 8D 56 FF B4 3F CD 21   .B.!.... ..V..?.!
FC50:  1F 0B C0 74 15 80 7E FF  1A 75 0F F7 D9 8B D1 B8   ...t..~. .u......
FC60:  02 42 CD 21 33 C9 B4 40  CD 21 33 C9 8B D1 B8 00   .B.!3..@ .!3.....
FC70:  42 CD 21 EB 6D C6 46 FD  00 8B 4E 0C E8 AC 00 89   B.!.m.F. ..N.....
FC80:  4E 0C F6 46 FE FF 75 07  F7 46 0A 02 00 75 03 80   N..F..u. .F...u..
FC90:  E1 FE 1E C5 56 06 B4 3C  CD 21 1F 73 03 E9 49 E6   ....V..< .!.s..I.
FCA0:  93 F6 46 FE FF 75 07 F7  46 0A 02 00 75 34 B4 3E   ..F..u.. F...u4.>
FCB0:  CD 21 8A 46 0A 24 03 0A  46 FE 1E C5 56 06 B4 3D   .!.F.$.. F...V..=
FCC0:  CD 21 1F 72 D8 93 F6 46  FD 01 75 16 F7 46 0C 01   .!.r...F ..u..F..
FCD0:  00 74 0F 80 C9 01 1E C5  56 06 B8 01 43 CD 21 1F   .t...... V...C.!.
FCE0:  72 BB F6 46 FC 40 75 3F  1E C5 56 06 B8 00 43 CD   r..F.@u? ..V...C.
FCF0:  21 1F 8B C1 32 C9 25 01  00 74 02 B1 10 F7 46 0A   !...2.%. .t....F.
FD00:  08 00 74 03 80 C9 20 3B  1E FB 05 72 0A B4 3E CD   ..t... ; ...r..>.
FD10:  21 B8 00 18 E9 B9 FE 0A  4E FC 80 C9 01 88 8F FD   !....... N.......
FD20:  05 8B C3 8B E5 5D CB 32  C9 EB DC A1 F0 05 F7 D0   .....].2 ........
FD30:  23 C1 33 C9 A8 80 75 03  80 C9 01 C3 55 8B EC 83   #.3...u. ....U...
FD40:  EC 02 8B 5E 06 3B 1E FB  05 72 06 F9 B8 00 09 EB   ...^.;.. .r......
FD50:  73 33 C0 8B 4E 0C E3 6C  F6 87 FD 05 02 75 65 81   s3..N..l .....ue.
FD60:  3E C0 0A D6 D6 75 04 FF  16 C2 0A 8B 4E 0C 1E C5   >....u.. ....N...
FD70:  56 08 B4 3F CD 21 1F 73  04 B4 09 EB 47 F6 87 FD   V..?.!.s ....G...
FD80:  05 80 74 40 80 A7 FD 05  FB 56 57 1E 07 8E 5E 0A   ..t@.... .VW...^.
FD90:  FC 8B F2 8B FA 8B C8 E3  27 B4 0D 80 3C 0A 75 06   ........ '...<.u.
FDA0:  26 80 8F FD 05 04 AC 3A  C4 74 1C 3C 1A 75 08 26   &......: .t.<.u.&
FDB0:  80 8F FD 05 02 EB 05 88  05 47 E2 EA 8B C7 2B C2   ........ .G....+.
FDC0:  06 1F 5F 5E E9 22 E5 83  F9 01 74 07 80 3C 0A 74   .._^.".. ..t..<.t
FDD0:  E9 EB E4 06 1F F6 87 FD  05 40 74 1C B8 00 44 CD   ........ .@t...D.
FDE0:  21 F7 C2 20 00 75 0D 1E  16 1F 8D 56 FF B4 3F CD   !.. .u.. ...V..?.
FDF0:  21 1F 72 CE B0 0A EB 30  1E 16 1F C6 46 FF 00 8D   !.r....0 ....F...
FE00:  56 FF B4 3F CD 21 1F 72  B9 0B C0 74 19 83 7E 0C   V..?.!.r ...t..~.
FE10:  01 74 1F B9 FF FF 8B D1  B8 01 42 CD 21 B9 01 00   .t...... ..B.!...
FE20:  80 7E FF 0A 74 07 B0 0D  C5 56 08 EB 8A C5 56 08   .~..t... .V....V.
FE30:  EB 88 80 7E FF 0A 75 DB  EB BA 55 8B EC 83 EC 08   ...~..u. ..U.....
FE40:  8B 5E 06 3B 1E FB 05 72  07 B8 00 09 F9 E9 99 E4   .^.;...r ........
FE50:  81 3E C0 0A D6 D6 75 04  FF 16 C2 0A F6 87 FD 05   .>....u. ........
FE60:  20 74 0B B8 02 42 33 C9  8B D1 CD 21 72 DF F6 87    t...B3. ...!r...
FE70:  FD 05 80 74 7C 8C 5E FA  8E 46 0A C5 56 08 33 C0   ...t|.^. .F..V.3.
FE80:  89 46 FE 89 46 FC FC 57  56 8B FA 8B F2 89 66 F8   .F..F..W V.....f.
FE90:  8B 4E 0C E3 3F B0 0A F2  AE 75 51 1E 8E 5E FA 9A   .N..?... .uQ..^..
FEA0:  AA 22 AF 0D 3D A8 00 76  4A 1F 83 EC 02 8B DC BA   ."..=..v J.......
FEB0:  00 02 3D 28 02 73 03 BA  80 00 2B E2 8B D4 8B FA   ..=(.s.. ..+.....
FEC0:  16 07 8B 4E 0C AC 3C 0A  74 0C 3B FB 74 19 AA E2   ...N..<. t.;.t...
```

```
 FED0:  F4 E8 26 00 EB 79 B0 0D  3B FB 75 03 E8 1B 00 AA   ..&..y.. ;.u.....
 FEE0:  B0 0A FF 46 FC EB E3 E8  10 00 EB E2 5E 5F 8E 5E   ...F.... ....^_.^
 FEF0:  FA EB 6D B8 FC FF 0E E8  BC E0 50 53 51 1E 06 1F   ..m..... ..PSQ...
 FF00:  8B CF 2B CA E3 12 51 8B  5E 06 B4 40 CD 21 59 72   ..+...Q. ^..@.!Yr
 FF10:  0E 01 46 FE 3B C8 77 07  1F 59 5B 58 8B FA C3 9F   ..F.;.w. .Y[X....
 FF20:  1F 83 C4 08 83 7E FE 00  75 25 9E 73 04 B4 09 EB   .....~.. u%.s....
 FF30:  24 8E 5E FA F6 87 FD 05  40 74 0E 8E 5E 0A 8B 5E   $.^..... @t..^..^
 FF40:  08 80 3F 1A 75 03 F8 EB  0C F9 B8 00 1C EB 06 8B   ..?.u... ........
 FF50:  46 FE 2B 46 FC 8B 66 F8  5E 5F 8E 5E FA E9 89 E3   F.+F..f. ^_.^....
 FF60:  8B 4E 0C 0B C9 75 05 8B  C1 E9 7D E3 1E C5 56 08   .N...u.. ..}...V.
 FF70:  B4 40 CD 21 1E 07 1F 73  04 B4 09 EB E0 0B C0 75   .@.!...s .......u
 FF80:  DC F6 87 FD 05 40 74 0B  8B DA 26 80 3F 1A 75 03   .....@t. ..&.?.u.
 FF90:  F8 EB CA F9 B8 00 1C EB  C4 00 59 5A A1 30 06 3B   ........ ..YZ.0.;
 FFA0:  C4 73 07 2B C4 F7 D8 52  51 CB 33 C0 EB F9 EA DD   .s.+...R Q.3.....
 FFB0:  22 AF 0D 00 EA CA 22 AF  0D 00 55 8B EC 56 C4 76   ".....". ..U..V.v
 FFC0:  06 8C C1 E3 05 26 80 4C  FE 01 5E 5D CB 55 8B EC   .....&.L ..^].U..
 FFD0:  56 57 8B 4E 06 83 F9 E8  77 69 1E A1 AE 08 0B C0   VW.N.... wi......
 FFE0:  74 48 BF C4 23 8B 36 B6  08 C5 1E B0 08 1E 56 57   tH..#.6. ......VW
 FFF0:  FF D7 5F 5E 73 2B 8C DA  C5 5F 0C 3B D6 75 EF 58   .._^s+.. ._.;.u.X
10000:  1F 1E C4 36 B0 08 26 8B  74 12 C5 1E AC 08 8C DA   ...6..&. t.......
10010:  3B D0 75 D9 1F 1E 81 FF  40 24 74 0E BF 40 24 EB   ;.u..... @$t..@$.
10020:  C4 5E 81 FF C4 23 74 0F  EB 0A 07 06 BF AC 08 E8   .^...#t. ........
10030:  FE 01 72 0E E8 7D 00 1F  89 16 B2 08 89 1E B0 08   ..r..}.. ........
10040:  EB 04 1F 33 C0 99 5F 5E  5D CB 06 57 8B F8 03 FB   ...3.._^ ]..W....
10050:  89 7F 04 4F 4F 2D 16 00  8D 77 14 C7 05 FE FF 89   ...OO-.. .w......
10060:  7F 0A 48 89 04 8C 1F 8B  C6 8C DA 8E C2 8D 7F 06   ..H..... ........
10070:  FC AB AB 47 47 33 C0 AB  AB AB AB 5F 07 C3 26 8B   ...GG3.. ..._..&.
10080:  45 02 0B C0 75 09 26 8C  5D 02 26 89 1D EB 14 06   E...u.&. ].&.....
10090:  26 C4 75 08 26 8C 5C 0E  26 89 5C 0C 8C 47 12 89   &.u.&.\. &.\..G..
100A0:  77 10 07 26 8C 5D 0A 26  89 5D 08 26 8C 5D 06 26   w..&.].& .].&.].&
100B0:  89 5D 04 C3 41 80 E1 FE  53 FC 8B 77 08 8B 5F 0A   .]..A... S..w.._.
100C0:  33 FF EB 23 8B C3 5B A8  01 75 42 53 8B 77 06 8B   3..#..[. .uBS.w..
100D0:  5F 08 3B DE 74 36 4B 33  FF EB 0C 90 8D 54 FE 3B   _.;.t6K3 .....T.;
100E0:  D3 73 E1 03 F0 72 23 AD  A8 01 74 F0 8B FE 48 3B   .s...r#. ..t...H;
100F0:  C1 73 23 03 F0 72 13 8B  D0 AD A8 01 74 DE 03 C2   .s#..r.. ....t...
10100:  05 02 00 8B F7 89 44 FE  EB E4 8B C0 5B 8B 47 06   ......D. ....[.G.
10110:  89 47 08 F9 EB 19 5B 89  4C FE 74 09 03 F9 2B C1   .G....[. L.t...+.
10120:  48 89 05 2B F9 03 F9 89  7F 08 8B C6 8C DA F8 C3   H..+.... ........
10130:  51 57 F6 47 02 01 74 66  E8 D5 00 8B FE 8B 04 A8   QW.G..tf ........
10140:  01 74 03 2B C8 49 41 41  8B 77 04 0B F6 74 4F 03   .t.+.IAA .w...tO.
10150:  CE 73 09 33 C0 BA F0 FF  E3 33 EB 42 B8 60 31 8E   .s.3.... .3.B.`1.
10160:  C0 26 A1 BA 08 3D 00 20  74 16 BA 00 80 3B D0 72   .&...=.  t....;.r
10170:  06 D1 EA 75 F8 EB 22 83  FA 08 72 1D D1 E2 8B C2   ...u..". ..r.....
10180:  48 8B D0 03 C1 73 02 33  C0 F7 D2 23 C2 52 E8 2E   H....s.3 ...#.R..
10190:  00 5A 73 0D 83 FA F0 74  05 B8 10 00 EB E2 F9 EB   .Zs....t ........
101A0:  1B 8B D0 2B 57 04 89 47  04 89 7F 08 8B 77 0A 4A   ...+W..G .....w.J
101B0:  89 14 42 03 F2 C7 04 FE  FF 89 77 0A 5F 59 C3 8B   ..B..... ..w._Y..
101C0:  D0 F6 47 02 04 74 0F 4A  8B 77 04 4E 3B D6 72 05   ..G..t.J .w.N;.r.
101D0:  39 57 FE 73 36 42 53 51  8C DE 8E C6 B1 04 D3 E8   9W.s6BSQ ........
101E0:  75 03 B8 00 10 F6 47 02  04 74 0A 03 C6 8B 1E F4   u.....G. .t......
101F0:  05 2B C3 8E C3 8B D8 B4  4A CD 21 59 5B 72 10 8B   .+...... J.!Y[r..
10200:  C2 F6 47 02 04 74 04 4A  89 57 FE F8 EB 01 F9 C3   ..G..t.J .W......
10210:  57 8B 77 08 3B 77 0A 75  03 8B 77 06 AD 3D FE FF   W.w.;w.u ..w..=..
```

```
10220:  74 08 8B FE 24 FE 03 F0  EB F2 4F 4F 8B F7 5F C3   t...$... ..OO.._.
10230:  8B D1 83 C2 27 80 E2 F0  8B DA F7 DB F7 DB F5 D1   ....'... ........
10240:  DB D1 EB D1 EB D1 EB B4  48 CD 21 72 26 3B 06 D0   ........ H.!r&;..
10250:  05 76 F4 3B 06 CE 05 76  03 A3 CE 05 8E D8 33 DB   .v.;...v ......3.
10260:  26 8B 45 0C 89 47 02 8B  C2 E8 DE FD E8 0F FE F8   &.E..G.. ........
10270:  EB 01 F9 C3 55 8B EC 8B  D7 8B DE 1E C4 7E 06 33   ....U... .....~.3
10280:  C0 B9 FF FF F2 AE 8D 75  FF C4 7E 0A B9 FF FF F2   .......u ..~.....
10290:  AE F7 D1 2B F9 8C C0 8E  D8 8E 46 08 87 FE 8B 46   ...+.... ..F....F
102A0:  06 F7 C6 01 00 74 02 A4  49 D1 E9 F3 A5 13 C9 F3   .....t.. I.......
102B0:  A4 8B F3 8B FA 1F 8C C2  5D CB 55 8B EC 8B D7 8B   ........ ].U.....
102C0:  DE 1E C5 76 0A 8B FE 8C  D8 8E C0 33 C0 B9 FF FF   ...v.... ...3....
102D0:  F2 AE F7 D1 C4 7E 06 8B  C7 A8 01 74 02 A4 49 D1   .....~.. ...t..I.
102E0:  E9 F3 A5 13 C9 F3 A4 8B  F3 8B FA 1F 8C C2 5D CB   ........ ......].
102F0:  55 8B EC 8B D7 8B DE 1E  C5 76 06 C4 7E 0A 33 C0   U....... .v..~.3.
10300:  B9 FF FF F2 AE F7 D1 2B  F9 F3 A6 74 05 1B C0 1D   .......+ ...t....
10310:  FF FF 1F 8B F3 8B FA 5D  CB 00 55 8B EC 8B D7 C4   .......] ..U.....
10320:  7E 06 33 C0 B9 FF FF F2  AE F7 D1 49 91 8B FA 5D   ~.3..... ...I...]
10330:  CB 00 55 8B EC 57 56 EB  04 90 FF 46 06 C4 5E 06   ..U..WV. ...F..^.
10340:  26 8A 07 98 8B D8 F6 87  DB 08 08 75 ED 2B C0 50   &....... ...u.+.P
10350:  50 06 FF 76 06 9A 2A 26  AF 0D 83 C4 04 50 FF 76   P..v..*& .....P.v
10360:  08 FF 76 06 9A 10 42 AF  0D 83 C4 0A 05 08 00 BB   ..v...B. ........
10370:  A0 0D 8B FB 8B F0 1E 07  1E 8E DA A5 A5 A5 A5 1F   ........ ........
10380:  8B C3 8C DA 5E 5F 8B E5  5D CB 55 8B EC 56 57 B3   ....^_.. ].U..VW.
10390:  01 8B 4E 0C 8B 46 06 33  D2 83 F9 0A 75 01 99 1E   ..N..F.3 ....u...
103A0:  C5 7E 08 E9 25 05 55 8B  EC 83 EC 08 C4 5E 0C 26   .~..%.U. .....^.&
103B0:  8B 47 06 26 8B 57 08 89  46 F8 89 56 FA C4 5E 06   .G.&.W.. F..V..^.
103C0:  26 C6 07 30 8D 47 01 89  46 FC 8C 46 FE EB 26 90   &..0.G.. F..F..&.
103D0:  C4 5E F8 26 80 3F 00 74  0F 26 8A 07 C4 5E FC 26   .^.&.?.t .&...^.&
103E0:  88 07 FF 46 F8 EB 08 90  C4 5E FC 26 C6 07 30 FF   ...F.... .^.&..0.
103F0:  46 FC FF 4E 0A 83 7E 0A  00 7F D5 C4 5E FC 26 C6   F..N..~. ....^.&.
10400:  07 00 83 7E 0A 00 7C 1F  C4 5E F8 26 80 3F 35 7C   ...~..|. .^.&.?5|
10410:  16 EB 05 90 26 C6 07 30  FF 4E FC C4 5E FC 26 80   ....&..0 .N..^.&.
10420:  3F 39 74 F0 26 FE 07 C4  5E 06 26 80 3F 31 75 0A   ?9t.&... ^.&.?1u.
10430:  C4 5E 0C 26 FF 47 02 EB  0F 90 8B C3 8C C2 40 52   .^.&.G.. ......@R
10440:  50 52 53 9A CA 25 AF 0D  8B E5 5D CB 55 8B EC 53   PRS..%.. ..].U..S
10450:  06 C4 5E 0A 26 C7 07 01  00 33 C0 07 5B 8B E5 5D   ..^.&... .3..[..]
10460:  CA 08 00 55 8B EC 53 06  C4 5E 06 33 C0 26 88 07   ...U..S. .^.3.&..
10470:  07 5B 8B E5 5D CA 04 00  55 8B EC 8B E5 5D CA 0A   .[..]... U....]..
10480:  00 55 8B EC 53 06 8B 46  0A C4 5E 06 26 89 07 07   .U..S..F ..^.&...
10490:  5B 8B E5 5D CA 06 00 55  8B EC 8B E5 5D CA 02 00   [..]...U ....]...
104A0:  55 8B EC 1E 8B 4E 0A 8B  5E 10 C5 56 0C B4 40 CD   U....N.. ^..V..@.
104B0:  21 33 C0 1F 8B E5 5D CA  0C 00 55 8B EC 8B 46 08   !3....]. ..U...F.
104C0:  2B 46 0C 1B D2 03 C0 13  D2 03 C0 13 D2 03 C0 13   +F...... ........
104D0:  D2 03 C0 13 D2 03 46 06  83 D2 00 2B 46 0A 83 DA   ......F. ...+F...
104E0:  00 5D CA 08 00 00 57 56  BE 8C 06 2B FF EB 12 90   .]....WV ...+....
104F0:  1E 56 9A 3A 06 AF 0D 83  C4 04 40 74 01 47 83 C6   .V.:.... ..@t.G..
10500:  0C 39 36 30 08 73 E9 8B  C7 5E 5F CB 55 8B EC 56   .960.s.. .^_.U..V
10510:  57 8B 56 0A 0B D2 7E 56  4A 8B 5E 0C C4 7E 06 0B   W.V...~V J.^..~..
10520:  D2 74 55 8B 4F 04 E3 1F  3B CA 76 02 8B CA 1E C5   .tU.O... ;.v.....
10530:  37 B4 0A 51 AC AA 3A C4  E0 FA 58 1F 89 37 74 33   7..Q..:. ..X..7t3
10540:  29 47 04 2B D0 EB D8 06  53 52 1E 53 0E E8 C2 E2   )G.+.... SR.S....
10550:  83 C4 04 5A 5B 07 3D FF  FF 74 08 AA 3C 0A 74 18   ...Z[.=. .t..<.t.
10560:  4A EB BC 3B 7E 06 74 06  F6 47 0A 20 74 0A 33 C0   J..;~.t. .G. t.3.
```

```
10570:  99 EB 0E 2B C1 29 47 04  33 C0 AA 8B 46 06 8B 56   ...+.)G. 3...F..V
10580:  08 5F 5E 5D CB 00 55 8B  EC 83 EC 04 57 56 C6 06   ._^]..U. ....WV..
10590:  B2 0D 42 8B 46 06 8B 56  08 A3 AE 0D 89 16 B0 0D   ..B.F..V ........
105A0:  BE A8 0D 89 04 89 54 02  C7 06 AC 0D FF 7F 8D 46   ......T. .......F
105B0:  0E 16 50 FF 76 0C FF 76  0A 8B C6 1E 50 9A 18 18   ..P.v..v ....P...
105C0:  AF 0D 83 C4 0C 8B F8 FF  0E AC 0D 78 0F C4 1E A8   ........ ...x....
105D0:  0D FF 06 A8 0D 26 C6 07  00 EB 0E 90 1E 56 2B C0   .....&.. .....V+.
105E0:  50 9A BE 0B AF 0D 83 C4  06 8B C7 5E 5F 8B E5 5D   P....... ...^_..]
105F0:  CB 90 55 8B EC 83 EC 04  56 C6 06 BE 0D 49 8B 46   ..U..... V....I.F
10600:  06 8B 56 08 A3 BA 0D 89  16 BC 0D BE B4 0D 89 04   ..V..... ........
10610:  89 54 02 52 50 9A 2A 26  AF 0D 83 C4 04 A3 B8 0D   .T.RP.*& ........
10620:  8D 46 0E 16 50 FF 76 0C  FF 76 0A B8 B4 0D 1E 50   .F..P.v. .v.....P
10630:  9A C4 0F AF 0D 83 C4 0C  5E 8B E5 5D CB 90 55 8B   ........ ^..]..U.
10640:  EC 57 8B 46 06 F7 66 08  73 05 33 C0 99 EB 1A 50   .W.F..f. s.3....P
10650:  9A BE 22 AF 0D 59 8B D8  0B DA 74 0D 50 8B F8 8E   .."..Y.. ..t.P...
10660:  C2 33 C0 41 D1 E9 F3 AB  58 5F 5D CB 55 8B EC 8E   .3.A.... X_].U...
10670:  46 08 B4 49 CD 21 5D CB  55 8B EC 56 57 8B 5E 0A   F..I.!]. U..VW.^.
10680:  8B 46 06 F7 E3 8B C8 8B  FA 8B 46 08 F7 E3 03 C7   .F...... ..F.....
10690:  8B D0 0B C1 74 1E 33 F6  8D 47 FF 83 FA 0F 77 14   ....t.3. .G....w.
106A0:  72 05 83 F9 F0 77 0D 83  FA 02 77 04 72 08 E3 06   r....w.. ..w.r...
106B0:  23 C3 74 18 EB 6D 83 FA  01 72 11 23 C3 74 0D 33   #.t..m.. .r.#.t.3
106C0:  C0 F7 F3 8B F2 03 CA 72  5A BA 01 00 8B D9 83 C3   .......r Z.......
106D0:  0F 83 D2 00 B9 04 00 D1  EA D1 DB E2 FA B4 48 CD   ........ ......H.
106E0:  21 72 40 3B 06 D0 05 76  F4 8B D0 03 D3 4A 3B 16   !r@;...v .....J;.
106F0:  CE 05 76 04 89 16 CE 05  8E C0 8B D0 FC B9 00 10   ..v..... ........
10700:  3B D9 73 02 8B CB D1 E1  D1 E1 D1 E1 33 FF 33 C0   ;.s..... ....3.3.
10710:  F3 AB 96 B9 00 10 2B D9  76 0C 96 8C C0 03 C1 8E   ......+. v.......
10720:  C0 EB DD 33 C0 99 5F 5E  5D CB 55 8B EC 8C D9 C5   ...3.._^ ].U.....
10730:  5E 06 8B D3 EB 0B 2C 61  3C 1A 73 04 04 41 88 07   ^.....,a <.s..A..
10740:  43 8A 07 0A C0 75 EF 92  8C DA 8E D9 5D CB 55 8B   C....u.. ....].U.
10750:  EC 8B 4E 0E 1E 57 56 0B  C9 75 03 E9 AF 00 C5 76   ..N..WV. .u.....v
10760:  0A C4 7E 06 1E 56 06 57  9A CA 27 AF 0D 8B 4E 0E   ..~..V.W ..'...N.
10770:  0B D2 78 57 2B C1 83 DA  00 73 50 49 03 F1 73 07   ..xW+... .sPI..s.
10780:  8C D8 05 00 10 8E D8 03  F9 73 07 8C C0 05 00 10   ........ .s......
10790:  8E C0 41 8B C1 48 2B C7  1B DB 23 C3 03 C7 2B C6   ..A..H+. ..#...+.
107A0:  1B DB 23 C3 03 C6 40 91  2B C1 FD F3 A4 FC 91 E3   ..#...@. +.......
107B0:  5C 83 FE FF 75 07 8C D8  2D 00 10 8E D8 83 FF FF   \...u... -.......
107C0:  75 D1 8C C0 2D 00 10 8E  C0 EB C8 8B C1 48 8B D7   u...-... .....H..
107D0:  F7 D2 2B C2 1B DB 23 C3  03 C2 8B D6 F7 D2 2B C2   ..+...#. ......+.
107E0:  1B DB 23 C3 03 C2 40 91  2B C1 D1 E9 F3 A5 13 C9   ..#...@. +.......
107F0:  F3 A4 91 E3 18 0B F6 75  07 8C D8 05 00 10 8E D8   .......u ........
10800:  0B FF 75 C7 8C C0 05 00  10 8E C0 EB BE 8B 46 06   ..u..... ......F.
10810:  8B 56 08 5E 5F 1F 5D CB  55 8B EC 8B 4E 0E 1E 57   .V.^_.]. U...N..W
10820:  56 E3 48 C5 76 0A C4 7E  06 8B C1 48 8B D7 F7 D2   V.H.v..~ ...H....
10830:  2B C2 1B DB 23 C3 03 C2  8B D6 F7 D2 2B C2 1B DB   +...#... ....+...
10840:  23 C3 03 C2 40 91 2B C1  D1 E9 F3 A5 13 C9 F3 A4   #...@.+. ........
10850:  91 E3 18 0B F6 75 07 8C  D8 05 00 10 8E D8 0B FF   .....u.. ........
10860:  75 C7 8C C0 05 00 10 8E  C0 EB BE 8B 46 06 8B 56   u....... ....F..V
10870:  08 5E 5F 1F 5D CB 55 8B  EC 8B 4E 0C E3 38 57 C4   .^_.].U. ..N..8W.
10880:  7E 06 8B D7 F7 DA 74 0C  2B D1 1B DB 23 D3 03 D1   ~.....t. +...#...
10890:  87 D1 2B D1 8B 46 0A 8A  E0 D1 E9 F3 AB 13 C9 F3   ..+..F.. ........
108A0:  AA 87 D1 E3 10 8C C3 81  C3 00 10 8E C3 D1 E9 F3   ........ ........
108B0:  AB 13 C9 F3 AA 5F 8B 46  06 8B 56 08 5D CB 8B 4E   ....._.F ..V.]..N
```

```
108C0:  0E 8B 46 06 8B 56 08 1E  C5 7E 0A 57 1E 07 FC 93   ..F..V.. .~.W....
108D0:  0A C0 74 13 83 F9 0A 75  0E 0B D2 79 0A B0 2D AA   ..t....u ...y..-.
108E0:  F7 DB 83 D2 00 F7 DA 8B  F7 92 33 D2 0B C0 74 02   ........ ..3...t.
108F0:  F7 F1 93 F7 F1 92 87 D3  04 30 3C 39 76 02 04 27   ........ .0<9v..'
10900:  AA 8B C2 0B C3 75 E2 88  05 4F AC 86 05 88 44 FF   .....u.. .O....D.
10910:  8D 44 01 3B C7 72 F2 8C  DA 58 1F 5F 5E 8B E5 5D   .D.;.r.. .X._^..]
10920:  CB 00 55 8B EC 8B 46 06  99 33 C2 2B C2 5D CB 90   ..U...F. .3.+.]..
10930:  55 8B EC 8B 46 06 8B 56  08 0B D2 7D 07 F7 D8 83   U...F..V ...}....
10940:  D2 00 F7 DA 5D CB 8A 0F  2A ED 43 8B D3 BB 02 00   ....]... *.C.....
10950:  81 3E C0 0A D6 D6 75 04  FF 16 C2 0A B4 40 CD 21   .>....u. .....@.!
10960:  CB 00 55 8B EC 1E C5 56  06 B4 41 CD 21 1F E9 63   ..U....V ..A.!..c
10970:  D9 00 55 8B EC 1E 53 C5  5E 06 FF 76 0C FF 76 0A   ..U...S. ^..v..v.
10980:  FF 77 02 FF 37 0E E8 C5  00 89 07 89 57 02 5B 1F   .w..7... ....W.[.
10990:  5D CA 08 00 55 8B EC 1E  53 C5 5E 06 8B 07 8B 57   ]...U... S.^....W
109A0:  02 8B 4E 0A 0E E8 D8 00  89 07 89 57 02 5B 1F 5D   ..N..... ...W.[.]
109B0:  CA 06 00 00 55 8B EC 57  56 53 33 FF 8B 46 08 0B   ....U..W VS3..F..
109C0:  C0 7D 11 47 8B 56 06 F7  D8 F7 DA 1D 00 00 89 46   .}.G.V.. .......F
109D0:  08 89 56 06 8B 46 0C 0B  C0 7D 11 47 8B 56 0A F7   ..V..F.. .}.G.V..
109E0:  D8 F7 DA 1D 00 00 89 46  0C 89 56 0A 0B C0 75 15   .......F ..V...u.
109F0:  8B 4E 0A 8B 46 08 33 D2  F7 F1 8B D8 8B 46 06 F7   .N..F.3. .....F..
10A00:  F1 8B D3 EB 38 8B D8 8B  4E 0A 8B 56 08 8B 46 06   ....8... N..V..F.
10A10:  D1 EB D1 D9 D1 EA D1 D8  0B DB 75 F4 F7 F1 8B F0   ........ ..u.....
10A20:  F7 66 0C 91 8B 46 0A F7  E6 03 D1 72 0C 3B 56 08   .f...F.. ...r.;V.
10A30:  77 07 72 06 3B 46 06 76  01 4E 33 D2 96 4F 75 07   w.r.;F.v .N3..Ou.
10A40:  F7 DA F7 D8 83 DA 00 5B  5E 5F 5D CA 08 00 55 8B   .......[ ^_]...U.
10A50:  EC 8B 46 08 8B 4E 0C 0B  C8 8B 4E 0A 75 09 8B 46   ..F..N.. ..N.u..F
10A60:  06 F7 E1 5D CA 08 00 53  F7 E1 8B D8 8B 46 06 F7   ...]...S .....F..
10A70:  66 0C 03 D8 8B 46 06 F7  E1 03 D3 5B 5D CA 08 00   f....F.. ...[]...
10A80:  32 ED E3 06 D1 E0 D1 D2  E2 FA CB 00 55 8B EC 53   2....... ....U..S
10A90:  8B 5E 06 FF 76 0A FF 76  08 FF 77 02 FF 37 0E E8   .^..v..v ..w..7..
10AA0:  12 FF 89 57 02 89 07 5B  5D CA 06 00 55 8B EC 53   ...W...[ ]...U..S
10AB0:  8B 5E 06 FF 76 0A FF 76  08 FF 77 02 FF 37 0E E8   .^..v..v ..w..7..
10AC0:  8C FF 89 07 89 57 02 5B  5D CA 06 00 66 FC FF FF   .....W.[ ]...f...
10AD0:  FF FF FF FF FE 3F CD CC  CC CC CC CC CC CC FB 3F   .....?.. .......?
10AE0:  BE E8 09 C7 04 01 30 33  C0 8B D0 40 B3 20 07 C3   ......03 ...@. ..
10AF0:  0B D2 75 0A 83 F9 F8 74  17 80 E1 0F 74 0D BE 00   ..u....t ....t...
10B00:  0A F6 C1 08 75 0D BE F9  09 EB 08 BE 07 0A EB 03   ....u... ........
10B10:  BE 0D 0A BA 01 00 07 33  C0 C3 06 8C D8 8E C0 FC   .......3 ........
10B20:  BF DC 09 57 B9 04 00 F3  A5 5E 8B 4C 06 80 64 07   ...W.... .^.L..d.
10B30:  7F B3 20 8B 04 0B 44 02  0B 44 04 8B D0 0B 44 06   .. ...D. .D....D.
10B40:  74 9E 0B C9 79 02 B3 2D  F7 D1 F7 C1 F0 7F F7 D1   t...y..- ........
1CB50:  74 9E 53 CD 35 3E 15 0A  CD 3D 50 A0 15 0A A2 17   t.S.5>.. .=P.....
10B60:  0A 58 CD 35 2E 17 0A CD  39 04 CD 35 C0 CD 37 3C   .X.5.... 9..5..7<
10B70:  CD 3D 33 FF BE E3 09 AC  8A F8 AD 8B C8 BA 10 4D   .=3..... .......M
10B80:  F7 E2 91 B0 4D F6 E4 03  C8 13 D7 B0 9A F6 E7 03   ....M... ........
10B90:  C8 13 FA 81 E9 F4 12 81  DF 43 13 57 F7 DF BE DC   ........ .C.W....
10BA0:  09 E8 37 02 BB DC 2D 5F  CD 3C 9B 2F CD 34 D9 CD   ..7...-_ .<./.4..
10BB0:  39 3E 13 0A CD 3D F6 06  14 0A 41 74 0B 47 BB E6   9>...=.. ..At.G..
10BC0:  2D CD 3C 9B 2F CD 3A C9  57 CD 37 3C CD 35 2E 15   -.<./.:. W.7<.5..
10BD0:  0A CD 3D AD 97 AD 95 AD  92 AD 93 AD 91 81 E9 FE   ..=..... ........
10BE0:  3F F7 D9 8B F7 33 C0 E3  0C D1 EB D1 DA D1 DD D1   ?....3.. ........
10BF0:  DE D0 DC E2 F4 81 D6 9A  03 13 E9 13 D1 13 D9 BF   ........ ........
10C00:  E9 09 B9 10 00 32 C0 51  53 52 55 56 50 D0 E4 D1   .....2.Q SRUVP...
```

```
10C10:  D6 D1 D5 D1 D2 D1 D3 D0  D0 D0 E4 D1 D6 D1 D5 D1   ........ ........
10C20:  D2 D1 D3 D0 D0 59 12 E5  59 13 F1 59 13 E9 59 13   .....Y.. Y..Y..Y.
10C30:  D1 59 13 D9 14 00 D0 E4  D1 D6 D1 D5 D1 D2 D1 D3   .Y...... ........
10C40:  D0 D0 59 04 30 AA E2 BD  4F 49 B0 30 FD F3 AE FC   ..Y.0... OI.0....
10C50:  83 C1 12 BE E8 09 88 0C  B8 01 00 5A 5B 07 C3 00   ........ ...Z[...
10C60:  00 00 00 00 00 00 A0 02  40 00 00 00 00 00 00 00   ........ @.......
10C70:  C8 05 40 00 00 00 00 00  00 00 FA 08 40 00 00 00   ..@..... ....@...
10C80:  00 00 00 40 9C 0C 40 00  00 00 00 00 00 50 C3 0F   ...@..@. .....P..
10C90:  40 00 00 00 00 00 00 24  F4 12 40 00 00 00 00 00   @......$ ..@.....
10CA0:  80 96 98 16 40 00 00 00  00 00 20 BC BE 19 40 00   ....@... .. ...@.
10CB0:  00 00 04 BF C9 1B 8E 34  40 00 A1 ED CC CE 1B C2   .......4 @.......
10CC0:  D3 4E 40 9E B5 70 2B A8  AD C5 9D 69 40 FD 25 E5   .N@..p+. ...i@.%.
10CD0:  1A 8E 4F 19 EB 83 40 D7  95 43 0E 05 8D 29 AF 9E   ..O...@. .C...)..
10CE0:  40 A0 44 ED 81 12 8F 81  82 B9 40 D5 A6 CF FF 49   @.D..... ..@....I
10CF0:  1F 78 C2 D3 40 E0 8C E9  80 C9 47 BA 93 A8 41 6B   .x..@... ..G...Ak
10D00:  55 27 39 8D F7 70 E0 7C  42 8E DE F9 9D FB EB 7E   U'9..p.| B......~
10D10:  AA 51 43 76 E3 CC F2 29  2F 84 81 26 44 CD CC CC   .QCv...) /..&D...
10D20:  CC CC CC CC CC FB 3F 0A  D7 A3 70 3D 0A D7 A3 F8   ......?. ..p=....
10D30:  3F 3B DF 4F 8D 97 6E 12  83 F5 3F 2C 65 19 E2 58   ?;.O..n. ..?,e..X
10D40:  17 B7 D1 F1 3F 23 84 47  1B 47 AC C5 A7 EE 3F B6   ....?#.G .G....?.
10D50:  69 6C AF 05 BD 37 86 EB  3F BC 42 7A E5 D5 94 BF   il...7.. ?.Bz....
10D60:  D6 E7 3F FD CE 61 84 11  77 CC AB E4 3F 5B E1 4D   ..?..a.. w...?[.M
10D70:  C4 BE 94 95 E6 C9 3F 53  3B 75 44 CD 14 BE 9A AF   ......?S ;uD.....
10D80:  3F BA 94 39 45 AD 1E B1  CF 94 3F C6 E2 BC BA 3B   ?..9E... ..?....;
10D90:  31 61 8B 7A 3F 59 C1 7E  B1 53 7C 12 BB 5F 3F 2F   1a.z?Y.~ .S|.._?/
10DA0:  8D 06 BE 92 85 15 FB 44  3F A5 E9 39 A5 27 EA 7F   .......D ?..9.'..
10DB0:  A8 2A 3F A1 E4 BC 64 7C  46 D0 DD 55 3E 06 CC 23   .*?...d| F..U>..#
10DC0:  54 77 83 FF 91 81 3D 3A  19 7A 63 25 43 31 C0 AC   Tw....=: .zc%C1..
10DD0:  3C D1 38 82 47 97 B8 00  FD D7 3B BB 1F 2F 0B FF   <.8.G... ..;../..
10DE0:  79 05 BB DD 2F F7 DF 57  5F 81 C3 46 00 0B FF 74   y.../..W _..F...t
10DF0:  27 8B C7 D1 EF D1 EF D1  EF 57 25 07 00 74 E9 53   '....... .W%..t.S
10E00:  D0 E0 8A E0 D0 E0 D0 E0  02 C4 32 E4 03 D8 CD 3C   ........ ..2....<
10E10:  9B 2F CD 3A C9 5B EB D0  C3 00 CD CC CC CC CC CC   ./.:.[.. ........
10E20:  CC CC FB 3F CD CC CC CC  CC CC CC CC CC CC FB 3F   ...?.... .......?
10E30:  55 8B EC 83 EC 0C 56 57  1E 33 C0 87 46 08 89 46   U.....VW .3..F..F
10E40:  FE 8B 7E 04 8B 46 12 36  C6 45 02 20 F6 C4 80 74   ..~..F.6 .E. ...t
10E50:  0C 80 66 13 7F 36 C6 45  02 2D 25 FF 7F 0B C0 75   ..f..6.E .-%....u
10E60:  10 8B 46 0A 0B 46 0C 0B  46 0E 0B 46 10 74 4D EB   ..F..F.. F..F.tM.
10E70:  65 3D FF 7F 75 60 8B 46  0A 0B 46 0C 0B 46 0E 8B   e=..u`.F ..F..F..
10E80:  46 10 75 17 BE 34 0A 3D  00 80 74 1A 3D 00 C0 75   F.u..4.= ..t.=..u
10E90:  0A BE 3A 0A 36 80 7D 02  2D 74 0B BE 26 0A A9 00   ..:.6.}. -t..&...
10EA0:  40 74 03 BE 2D 0A 36 C7  05 01 00 16 07 8D 7D 03   @t..-.6. ......}.
10EB0:  33 C9 8A 0C 41 F3 A4 33  C0 E9 79 01 8B 7E 04 36   3...A..3 ..y..~.6
10EC0:  C7 05 00 00 36 C6 45 02  20 36 C6 45 03 00 36 C6   ....6.E.  6.E..6.
10ED0:  45 04 00 E9 5C 01 33 FF  8A 7E 11 8B 46 12 8B C8   E...\.3. .~..F...
10EE0:  BA 10 4D F7 E2 91 B0 4D  F6 E4 03 C8 13 D7 B0 9A   ..M....M ........
10EF0:  F6 E7 03 C8 13 FA 81 E9  F4 12 81 DF 43 13 57 F7   ........ ....C.W.
10F00:  DF 8D 46 08 16 50 57 B8  01 00 50 E8 E8 03 5F 81   ..F..PW. ..P..._.
10F10:  7E 12 FF 3F 72 10 47 8D  46 08 16 50 B8 34 31 0E   ~..?r.G. F..P.41.
10F20:  50 E8 A7 04 EB E9 8B 5E  04 36 89 3F 8B 46 FE F7   P......^ .6.?.F..
10F30:  46 06 01 00 74 06 03 C7  79 02 EB 80 3D 15 00 76   F...t... y...=..v
10F40:  03 B8 15 00 89 46 FE 40  89 46 F4 8B 46 12 2D FE   .....F.@ .F..F.-.
10F50:  3F F7 D8 32 E4 8B 5E 10  8B 4E 0E 8B 56 0C 8B 76   ?..2..^. .N..V..v
```

```
10F60:  0A 8B 7E 08 0A C0 74 10  D1 EB D1 D9 D1 DA D1 DE   ..~...t. ........
10F70:  D1 DF D0 DC FE C8 75 F0  16 07 89 7E F6 8B 7E 04   ......u. ...~..~.
10F80:  8D 7D 04 87 7E F6 32 C0  89 5E 12 89 4E 10 89 56   .}..~.2. .^..N..V
10F90:  0E 89 76 0C 89 7E 0A 88  66 09 D0 E4 D1 D7 D1 D6   ..v..~.. f.......
10FA0:  D1 D2 D1 D1 D1 D3 D0 D0  D0 E4 D1 D7 D1 D6 D1 D2   ........ ........
10FB0:  D1 D1 D1 D3 D0 D0 02 66  09 13 7E 0A 13 76 0C 13   .......f ..~..v..
10FC0:  56 0E 13 4E 10 13 5E 12  14 00 D0 E4 D1 D7 D1 D6   V..N..^. ........
10FD0:  D1 D2 D1 D1 D1 D3 D0 D0  04 30 87 7E F6 AA 87 7E   ........ .0.~...~
10FE0:  F6 FF 4E F4 75 A0 8B 7E  F6 8B 76 04 83 EF 02 3C   ..N.u..~ ..v....<
10FF0:  35 72 2A 8D 4C 04 EB 0B  26 80 3D 39 75 11 26 C6   5r*.L... &.=9u.&.
11000:  05 30 4F 3B CF 76 F1 47  26 C6 05 30 36 FF 04 26   .0O;.v.G &..06..&
11010:  FE 05 2B F9 8B DF 43 36  88 5C 03 EB 15 8B 4E FE   ..+...C6 .\....N.
11020:  E3 08 B0 30 FD F3 AE FC  75 03 E9 8F FE 41 36 88   ...0.... u....A6.
11030:  4C 03 B8 01 00 1F 5F 5E  8B E5 5D C2 10 00 00 00   L....._^ ..].....
11040:  00 00 00 00 00 00 00 A0  02 40 00 00 00 00 00 00   ........ .@......
11050:  00 00 00 C8 05 40 00 00  00 00 00 00 00 00 00 FA   .....@.. ........
11060:  08 40 00 00 00 00 00 00  00 00 40 9C 0C 40 00 00   .@...... ..@..@..
11070:  00 00 00 00 00 00 50 C3  0F 40 00 00 00 00 00 00   ......P. .@......
11080:  00 00 24 F4 12 40 00 00  00 00 00 00 00 80 96 98   ..$..@.. ........
11090:  16 40 00 00 00 00 00 00  00 20 BC BE 19 40 00 00   .@...... . ...@..
110A0:  00 00 00 04 BF C9 1B 8E  34 40 00 00 00 A1 ED CC   ........ 4@......
110B0:  CE 1B C2 D3 4E 40 20 F0  9E B5 70 2B A8 AD C5 9D   ....N@ . ..p+....
110C0:  69 40 D0 5D FD 25 E5 1A  8E 4F 19 EB 83 40 71 96   i@.].%.. .O...@q.
110D0:  D7 95 43 0E 05 8D 29 AF  9E 40 F9 BF A0 44 ED 81   ..C...). .@...D..
110E0:  12 8F 81 82 B9 40 BF 3C  D5 A6 CF FF 49 1F 78 C2   .....@.< ....I.x.
110F0:  D3 40 6F C6 E0 8C E9 80  C9 47 BA 93 A8 41 BC 85   .@o..... .G...A..
11100:  6B 55 27 39 8D F7 70 E0  7C 42 BC DD 8E DE F9 9D   kU'9..p. |B......
11110:  FB EB 7E AA 51 43 A1 E6  76 E3 CC F2 29 2F 84 81   ..~.QC.. v...)/..
11120:  26 44 28 10 17 AA F8 AE  10 E3 C5 C4 FA 44 EB A7   &D(..... .....D..
11130:  D4 F3 F7 EB E1 4A 7A 95  CF 45 65 CC C7 91 0E A6   .....Jz. .Ee.....
11140:  AE A0 19 E3 A3 46 0D 65  17 0C 75 81 86 75 76 C9   .....F.e ..u..uv.
11150:  48 4D 58 42 E4 A7 93 39  3B 35 B8 B2 ED 53 4D A7   HMXB...9 ;5...SM.
11160:  E5 5D 3D C5 5D 3B 8B 9E  92 5A FF 5D A6 F0 A1 20   .]=.];.. .Z.]...
11170:  C0 54 A5 8C 37 61 D1 FD  8B 5A 8B D8 25 5D 89 F9   .T..7a.. .Z..%]..
11180:  DB 67 AA 95 F8 F3 27 BF  A2 C8 5D DD 80 6E 4C C9   .g....'. ..]..nL.
11190:  9B 97 20 8A 02 52 60 C4  25 75 CD CC CD CC CC CC   .. ..R`. %u......
111A0:  CC CC CC CC FB 3F 71 3D  0A D7 A3 70 3D 0A D7 A3   .....?q= ...p=...
111B0:  F8 3F 5A 64 3B DF 4F 8D  97 6E 12 83 F5 3F C3 D3   .?Zd;.O. .n...?..
111C0:  2C 65 19 E2 58 17 B7 D1  F1 3F D0 0F 23 84 47 1B   ,e..X... .?..#.G.
111D0:  47 AC C5 A7 EE 3F 40 A6  B6 69 6C AF 05 BD 37 86   G....?@. .il...7.
111E0:  EB 3F 33 3D BC 42 7A E5  D5 94 BF D6 E7 3F C2 FD   .?3=.Bz. .....?..
111F0:  FD CE 61 84 11 77 CC AB  E4 3F 2F 4C 5B E1 4D C4   ..a..w.. .?/L[.M.
11200:  BE 94 95 E6 C9 3F 92 C4  53 3B 75 44 CD 14 BE 9A   .....?.. S;uD....
11210:  AF 3F DE 67 BA 94 39 45  AD 1E B1 CF 94 3F 24 23   .?.g..9E .....?$#
11220:  C6 E2 BC BA 3B 31 61 8B  7A 3F 61 55 59 C1 7E B1   ....;1a. z?aUY.~.
11230:  53 7C 12 BB 5F 3F D7 EE  2F 8D 06 BE 92 85 15 FB   S|.._?.. /.......
11240:  44 3F 24 3F A5 E9 39 A5  27 EA 7F A8 2A 3F 7D AC   D?$?..9. '...*?}.
11250:  A1 E4 BC 64 7C 46 D0 DD  55 3E 63 7B 06 CC 23 54   ...d|F.. U>c{..#T
11260:  77 83 FF 91 81 3D 91 FA  3A 19 7A 63 25 43 31 C0   w....=.. :.zc%C1.
11270:  AC 3C 21 89 D1 38 82 47  97 B8 00 FD D7 3B DC 88   .<!..8.G .....;..
11280:  58 08 1B B1 E8 E3 86 A6  03 3B C6 84 45 42 07 B6   X....... .;..EB..
11290:  99 75 37 DB 2E 3A 33 71  1C D2 23 DB 32 EE 49 90   .u7..:3q ..#.2.I.
112A0:  5A 39 A6 87 BE C0 57 DA  A5 82 A6 A2 B5 32 E2 68   Z9....W. .....2.h
```

B_ENROLL.DMP Tuesday, July 13, 1993 1:12 pm Page 84


```
112B0:  B2 11 A7 52 9F 44 59 B7  10 2C 25 49 E4 2D 36 34   ...R.DY. .,%I.-64
112C0:  4F 53 AE CE 6B 25 8F 59  04 A4 C0 DE C2 7D FB E8   OS..k%.Y .....}..
112D0:  C6 1E 9E E7 88 5A 57 91  3C BF 50 83 22 18 4E 4B   .....ZW. <.P.".NK
112E0:  65 62 FD 83 8F AF 06 94  7D 11 E4 2D DE 9F CE D2   eb...... }..-....
112F0:  C8 04 DD A6 D8 0A 55 8B  EC 83 EC 06 56 57 8B 7E   ......U. ....VW.~
11300:  06 BB EE 32 0B FF 74 7A  79 05 BB 4A 34 F7 DF C7   ...2..tz y..J4...
11310:  46 FA A4 36 83 7E 04 00  75 20 C7 46 FA 9A 36 CD   F..6.~.. u .F..6.
11320:  35 7E FE CD 3D 8B 46 FE  0D 38 00 89 46 FC CD 35   5~..=.F. .8..F..5
11330:  6E FC C4 76 08 CD 3C DB  6C 02 57 5F 83 C3 54 0B   n..v..<. l.W_..T.
11340:  FF 74 23 8B C7 D1 EF D1  EF D1 EF 57 25 07 00 74   .t#..... ...W%..t
11350:  EA 53 D0 E0 D0 E0 8A E0  D0 E0 02 C4 32 E4 03 D8   .S...... ....2...
11360:  FF 66 FA 5B EB D5 83 7E  04 00 75 16 CD 37 E2 CD   .f.[...~ ..u..7..
11370:  35 6E FE C4 76 08 CD 3C  DB 7C 02 26 C7 04 00 00   5n..v..< .|.&....
11380:  CD 3D 5F 5E 8B E5 5D C2  08 00 CD 3C 9B 6F 02 CD   .=_^..]. ...<.o..
11390:  3A C9 EB CF 2E FF 77 0A  2E FF 77 08 2E FF 77 06   :.....w. ..w...w.
113A0:  2E FF 77 04 2E 8B 4F 02  2E 8B 07 3D 00 80 83 D1   ..w...O. ...=....
113B0:  FF 51 50 8B C4 FF 76 0A  FF 76 08 16 50 E8 0B 00   .QP...v. .v..P...
113C0:  83 C4 0C EB 9E E9 6C 01  E9 54 01 55 8B EC 83 EC   ......l. .T.U....
113D0:  12 56 57 B9 09 00 8C D0  8E C0 8D 7E EE 33 C0 F3   .VW..... ...~.3..
113E0:  AB C5 76 08 C4 7E 04 8B  44 0A 26 8B 5D 0A 8B C8   ..v..~.. D.&.]...
113F0:  33 CB 81 E1 00 80 89 4E  FE BA FF 7F 23 C2 3B C2   3......N ....#.;.
11400:  74 C3 23 DA 3B DA 74 BD  8B D0 03 D3 81 FA FD BF   t.#.;.t. ........
11410:  77 B3 81 FA BF 3F 76 B0  0B C0 75 11 42 8B 04 0B   w....?v. ..u.B...
11420:  44 02 0B 44 04 0B 44 06  0B 44 08 74 9B 0B DB 75   D..D..D. .D.t...u
11430:  16 42 26 8B 05 26 0B 45  02 26 0B 45 04 26 0B 45   .B&..&.E .&.E.&.E
11440:  06 26 0B 45 08 74 81 81  EA FE 3F 89 54 0A 83 C7   .&.E.t.. ..?.T...
11450:  08 B9 05 00 8D 5E EE 51  56 57 26 8B 05 F7 24 36   .....^.Q VW&...$6
11460:  01 07 36 11 57 02 36 83  57 04 00 83 C6 02 83 EF   ..6.W.6. W.......
11470:  02 E2 E7 5F 5E 59 83 C3  02 83 C6 02 83 C1 FF 75   ..._^Y.. .......u
11480:  D6 8B 76 08 8B 56 F0 8B  4E F2 8B 5E F4 8B 46 F6   ..v..V.. N..^..F.
11490:  8B 7E F8 83 7C 0A 00 7F  14 EB 5F D1 66 EE D1 D2   .~..|... .._.f...
114A0:  D1 D1 D1 D3 D1 D0 D1 D7  FF 4C 0A 74 4D 0B FF 79   ........ .L.tM..y
114B0:  EA 81 7E EE 00 80 72 1F  77 06 F7 C2 01 00 74 17   ..~...r. w.....t.
114C0:  83 C2 01 83 D1 00 83 D3  00 15 00 00 83 D7 00 73   ........ .......s
114D0:  06 BF 00 80 FF 44 0A 81  7C 0A FF 7F 73 56 89 7C   .....D.. |...sV.|
114E0:  08 89 44 06 89 5C 04 89  4C 02 89 14 8B 46 FE 09   ..D..\.. L....F..
114F0:  44 0A 5F 5E 8B E5 5D C2  08 00 FF 4C 0A D1 EF D1   D._^..]. ...L....
11500:  D8 D1 DB D1 D9 D1 DA D1  5E EE 83 56 FC 00 FF 44   ........ ^..V...D
11510:  0A 75 EA 83 7E FC 00 74  98 83 4E EE 01 EB 92 33   .u..~..t ..N....3
11520:  C0 89 44 0A 89 44 08 89  44 06 89 44 04 89 44 02   ..D..D.. D..D..D.
11530:  89 04 EB BE B8 FF 7F 0B  46 FE 89 44 0A 33 C0 89   ........ F..D.3..
11540:  44 08 89 44 06 89 44 04  89 44 02 89 04 EB A3 00   D..D..D. .D......
11550:  55 8B EC 83 EC 0C 56 57  8B 46 06 89 46 F4 C4 76   U.....VW .F..F..v
11560:  08 33 C0 8B F8 8B D8 8B  C8 8B D0 26 8A 14 46 EB   .3...... ...&..F.
11570:  3A 89 7E FE 89 46 FC 89  5E FA 89 4E F8 89 56 F6   :.~..F.. ^..N..V.
11580:  E8 7B 00 E8 78 00 03 56  F6 13 4E F8 13 5E FA 13   .{..x..V ..N..^..
11590:  46 FC 13 7E FE E8 66 00  26 02 14 46 80 D6 00 83   F..~..f. &..F....
115A0:  D1 00 83 D3 00 15 00 00  83 D7 00 FF 4E F4 75 C1   ........ ....N.u.
115B0:  BE 4E 40 EB 0D 8B F8 8B  C3 8B D9 8B CA 33 D2 83   .N@..... .....3..
115C0:  EE 10 0B FF 74 EF 78 0F  D1 E2 D1 D1 D1 D3 D1 D0   ....t.x. ........
115D0:  D1 D7 4E 0B FF 79 F1 56  8B 76 04 36 8F 44 0A 36   ..N..y.V .v.6.D.6
115E0:  89 7C 08 36 89 44 06 36  89 5C 04 36 89 4C 02 36   .|.6.D.6 .\.6.L.6
115F0:  89 14 8B C6 8C D2 5F 5E  8B E5 5D C2 08 00 D1 E2   ......_^ ..].....
```

```
11600:  D1 D1 D1 D3 D1 D0 D1 D7  C3 00 55 8B EC 83 EC 0E   ........ ..U.....
11610:  16 8D 46 F6 50 FF 76 0C  FF 76 0A FF 76 08 FF 76   ..F.P.v. .v..v..v
11620:  06 FF 76 04 E8 4B 00 CD  35 7E F2 CD 37 6E F6 8B   ..v..K.. 5~..7n..
11630:  5E F2 83 CB 18 89 5E F4  CD 37 E2 C4 5E 0E CD 35   ^.....^. .7..^..5
11640:  6E F4 CD 3C DD 1F CD 39  7E F4 CD 37 E2 CD 35 6E   n..<...9 ~..7..5n
11650:  F2 0B C0 75 17 8B 5E F4  33 C0 F7 C3 18 00 74 0C   ...u..^. 3.....t.
11660:  B8 02 00 F7 C3 08 00 75  03 B8 01 00 8B E5 5D C2   .......u ......].
11670:  0E 00 55 8B EC 83 EC 34  56 57 1E C5 76 06 33 C0   ..U....4 VW..v.3.
11680:  89 46 F2 8C 5E F0 89 76  EE 89 46 EC 89 46 E8 89   .F..^..v ..F..F..
11690:  46 EA C7 46 E6 19 00 16  07 8D 7E CC AC 3C 20 74   F..F.... ..~..< t
116A0:  FB 3C 09 74 F7 3C 0A 74  F3 3C 0D 74 EF 0A C0 75   .<.t.<.t .<.t...u
116B0:  03 E9 EF 01 3C 2B 74 09  3C 2D 75 06 C7 46 EC 00   ....<+t. <-u..F..
116C0:  80 AC 3C 30 72 04 3C 39  76 10 3C 2E 75 E3 AC 3C   ..<0r.<9 v.<.u..<
116D0:  30 72 DE 3C 39 77 DA EB  15 AC 3C 30 74 FB 0A C0   0r.<9w.. ..<0t...
116E0:  75 07 4E 89 76 EE E9 BE  01 3C 2E 75 12 AC FF 4E   u.N.v... .<.u...N
116F0:  EA 3C 30 74 F8 FF 46 EA  0A C0 74 E6 EB 2B AC 3C   .<0t..F. ..t..+.<
11700:  30 72 21 3C 39 77 1D 2C  30 AA FF 4E E6 75 EF AC   0r!<9w., 0..N.u..
11710:  FF 46 EA 3C 30 72 04 3C  39 76 F4 FF 4E EA 3C 2E   .F.<0r.< 9v..N.<.
11720:  74 1A EB 21 3C 2E 75 1D  AC 3C 30 72 18 3C 39 77   t..!<.u. .<0r.<9w
11730:  14 2C 30 AA FF 4E EA FF  4E E6 75 EC AC 3C 30 72   .,0..N.. N.u..<0r
11740:  04 3C 39 76 F7 F7 5E E6  83 46 E6 19 8D 5C FF 89   .<9v..^. .F...\..
11750:  5E EE 33 DB 3C 45 74 0E  3C 65 74 0A 3C 44 74 06   ^.3.<Et. <et.<Dt.
11760:  3C 64 74 02 EB 52 AC 3C  2B 74 09 3C 2D 75 06 C7   <dt..R.< +t.<-u..
11770:  46 E8 FF FF AC 3C 30 72  3F 3C 39 77 3B 2D 30 00   F....<0r ?<9w;-0.
11780:  8B D8 AC 3C 30 72 24 3C  39 77 20 2C 30 81 FB 66   ...<0r$< 9w ,0..f
11790:  06 77 0C D1 E3 03 C3 D1  E3 D1 E3 03 D8 79 E3 BB   .w...... .....y..
117A0:  FF 3F AC 3C 30 72 04 3C  39 76 F7 33 5E E8 2B 5E   .?.<0r.< 9v.3^.+^
117B0:  E8 01 5E EA 4E 89 76 EE  83 7E E6 00 75 03 E9 E6   ..^.N.v. .~..u...
117C0:  00 26 C6 05 00 4F 83 7E  E6 18 76 17 26 8A 05 26   .&...O.~ ..v.&..&
117D0:  C6 05 00 FF 4E E6 FF 46  EA 4F 3C 05 72 14 26 FE   ....N..F .O<.r.&.
117E0:  05 EB 15 83 7E EA 00 74  0F EB 07 4F FF 4E E6 FF   ....~..t ...O.N..
117F0:  46 EA 26 80 3D 00 74 F3  16 8D 46 CC 50 FF 76 E6   F.&.=.t. ..F.P.v.
11800:  8D 46 F4 50 E8 49 FD 8B  46 EA 0B C0 74 1E 3D 50   .F.P.I.. F...t.=P
11810:  14 7C 03 E9 A3 00 3D B0  EB 7F 03 E9 95 00 16 8D   .|....=. ........
11820:  46 F4 50 FF 76 EA FF 76  04 E8 CA FA 8B 46 FC 8B   F.P.v..v .....F..
11830:  5E FA 8B 4E F8 8B 56 F6  81 7E F4 00 80 72 1C 77   ^..N..V. .~...r.w
11840:  06 F7 C2 01 00 74 14 83  C2 01 83 D1 00 83 D3 00   .....t.. ........
11850:  15 00 00 73 06 80 CC 80  FF 46 FE 8B 76 FE 81 FE   ...s.... .F..v...
11860:  FF 7F 73 55 0B F6 75 0A  8B F0 0B F3 0B F1 0B F2   ..sU..u. ........
11870:  74 41 C5 76 0E 89 44 06  89 5C 04 89 4C 02 89 14   tA.v..D. .\..L...
11880:  8B 46 FE 0B 46 EC 89 44  08 C5 76 0A 8B 46 EE 89   .F..F..D ..v..F..
11890:  04 8B 46 F0 89 44 02 8B  46 F2 1F 5F 5E 8B E5 5D   ..F..D.. F.._^..]
118A0:  C2 0E 00 83 4E F2 04 C4  7E 0E 33 C0 B9 05 00 F3   ....N... ~.3.....
118B0:  AB EB D6 83 4E F2 01 EB  EE 83 4E F2 02 C5 76 0E   ....N... ..N...v.
118C0:  B8 FF 7F 0B 46 EC 89 44  08 C7 44 06 00 80 33 C0   ....F..D ..D...3.
118D0:  89 44 04 89 44 02 89 04  EB AF 55 8B EC 83 EC 0A   .D..D... ..U.....
118E0:  C4 5E 06 26 8A 07 98 8B  D8 F6 87 DB 08 01 74 06   .^.&.... ......t.
118F0:  8D 47 20 EB 08 90 8B 5E  06 26 8A 07 98 3D 65 00   .G ....^ .&...=e.
11900:  74 13 FF 46 06 C4 5E 06  26 8A 07 98 8B D8 F6 87   t..F..^. &.......
11910:  DB 08 04 75 ED C4 5E 06  26 8A 07 88 46 FE 26 C6   ...u..^. &...F.&.
11920:  07 2E FF 46 06 C4 5E 06  26 8A 07 88 46 FC 8A 46   ...F..^. &...F..F
11930:  FE 26 88 07 8A 46 FC 88  46 FE C4 5E 06 FF 46 06   .&...F.. F..^..F.
11940:  26 80 3F 00 75 DF 8B E5  5D CB 55 8B EC 83 EC 08   &.?.u... ].U.....
```

```
11950:  EB 09 26 80 3F 2E 74 0C  FF 46 06 C4 5E 06 26 80   ..&.?.t. .F..^.&.
11960:  3F 00 75 EE FF 46 06 26  80 3F 00 74 56 EB 10 90   ?.u..F.& .?.tV...
11970:  26 80 3F 65 74 12 26 80  3F 45 74 0C FF 46 06 8B   &.?et.&. ?Et..F..
11980:  5E 06 26 80 3F 00 75 E8  8B C3 8C C2 FF 4E 06 89   ^.&.?.u. .....N..
11990:  46 FC 89 56 FE EB 04 90  FF 4E 06 8B 5E 06 26 80   F..V.... .N..^.&.
119A0:  3F 30 74 F4 26 80 3F 2E  75 03 FF 4E 06 C4 5E FC   ?0t.&.?. u..N..^.
119B0:  FF 46 FC 26 8A 07 FF 46  06 C4 5E 06 26 88 07 0A   .F.&...F ..^.&...
119C0:  C0 75 EA 8B E5 5D CB 90  55 8B EC 83 EC 02 C4 5E   .u...].. U......^
119D0:  06 CD 3C DD 07 CD 38 16  88 0B CD 39 D8 CD 39 7E   ..<...8. ...9..9¯
119E0:  FE CD 3D 8A 66 FF 9E 72  07 B8 01 00 8B E5 5D CB   ..=.f..r ......].
119F0:  2B C0 8B E5 5D CB 55 8B  EC 57 56 8B 46 06 48 74   +...].U. .WV.F.Ht
11A00:  41 48 74 20 FF 76 0E FF  76 0C 9A 42 26 AF 0D 83   AHt .v.. v..B&...
11A10:  C4 04 8E C2 8B D8 CD 3C  DD 07 C4 5E 08 CD 3C D9   .......< ...^..<.
11A20:  1F EB 16 90 FF 76 0E FF  76 0C 9A 1E 47 AF 0D 83   .....v.. v...G...
11A30:  C4 04 C4 5E 08 CD 3C DB  3F CD 3D 5E 5F 8B E5 5D   ...^..<. ?.=^_..]
11A40:  CB 90 FF 76 0E FF 76 0C  9A 42 26 AF 0D 83 C4 04   ...v..v. .B&.....
11A50:  8B F0 1E 8E DA C4 7E 08  A5 A5 A5 A5 1F 5E 5F 8B   ......¯. .....^_.
11A60:  E5 5D CB 90 55 8B EC 83  EC 0A 57 56 80 3E 50 0A   .]..U... ..WV.>P.
11A70:  00 74 39 C4 1E C0 0D 89  5E FC 8C 46 FE 26 83 3F   .t9..... ^..F.&.?
11A80:  2D 75 05 B8 01 00 EB 02  2B C0 03 46 0A 8B 56 0C   -u...... +..F..V.
11A90:  89 46 F8 89 56 FA 52 50  83 7E 0E 00 7E 06 B8 01   .F..V.RP .¯..¯...
11AA0:  00 EB 03 90 2B C0 50 E8  22 04 EB 5B C4 5E 06 26   ....+.P. "..[.^.&
11AB0:  FF 77 06 26 FF 77 04 26  FF 77 02 26 FF 37 9A 6A   .w.&.w.& .w.&.7.j
11AC0:  42 AF 0D 83 C4 08 89 46  FC 89 56 FE 52 50 8B 46   B......F ..V.RP.F
11AD0:  0E 40 50 83 7E 0E 00 7E  05 B8 01 00 EB 02 2B C0   .@P.¯..¯ ......+.
11AE0:  C4 5E FC 89 46 F6 26 83  3F 2D 75 06 B8 01 00 EB   .^..F.&. ?-u.....
11AF0:  03 90 2B C0 03 46 F6 03  46 0A 8B 56 0C 52 50 9A   ..+..F.. F..V.RP.
11B00:  B6 26 AF 0D 83 C4 0A 8B  46 0A 8B 56 0C 89 46 F8   .&...... F..V..F.
11B10:  89 56 FA C4 5E FC 26 83  3F 2D 75 0C 8E C2 8B D8   .V..^.&. ?-u.....
11B20:  26 C6 07 2D 40 89 46 F8  83 7E 0E 00 7E 12 C4 5E   &..-@.F. .¯..¯..^
11B30:  F8 26 8A 47 01 26 88 07  43 89 5E F8 26 C6 07 2E   .&.G.&.. C.^.&...
11B40:  B8 4A 0A 1E 50 80 3E 50  0A 01 1B C0 F7 D8 03 46   .J..P.>P .......F
11B50:  F8 8B 56 FA 03 46 0E 52  50 9A CA 25 AF 0D 83 C4   ..V..F.R P..%....
11B60:  08 89 46 F8 89 56 FA 83  7E 10 00 74 07 C4 5E F8   ..F..V.. ¯..t..^.
11B70:  26 C6 07 45 FF 46 F8 C4  5E FC 26 C4 7F 06 26 80   &..E.F.. ^.&...&.
11B80:  3D 30 74 5C 8E 46 FE 26  8B 77 02 4E 79 0D 8B C6   =0t\.F.& .w.Ny...
11B90:  F7 D8 8B F0 C4 5E F8 26  C6 07 2D FF 46 F8 83 FE   .....^.& ..-.F...
11BA0:  64 7C 15 8B C6 B9 64 00  99 F7 F9 C4 5E F8 26 00   d|....d. ....^.&.
11BB0:  07 8B C6 99 F7 F9 8B F2  FF 46 F8 83 FE 0A 7C 15   ........ .F....|.
11BC0:  8B C6 B9 0A 00 99 F7 F9  C4 5E F8 26 00 07 8B C6   ........ .^.&....
11BD0:  99 F7 F9 8B F2 8B C6 FF  46 F8 C4 5E F8 26 00 07   ........ F..^.&..
11BE0:  8B 46 0A 8B 56 0C 5E 5F  8B E5 5D CB 55 8B EC 83   .F..V.^_ ..].U...
11BF0:  EC 04 C6 06 50 0A 01 FF  76 10 FF 76 0E FF 76 0C   ....P... v..v..v.
11C00:  FF 76 0A FF 76 08 FF 76  06 0E E8 57 FE C6 06 50   .v..v..v ...W...P
11C10:  0A 00 8B E5 5D CB 55 8B  EC 83 EC 0E 56 80 3E 50   ....].U. ....V.>P
11C20:  0A 00 74 40 C4 1E C0 0D  89 5E FC 8C 46 FE 26 83   ..t@.... .^..F.&.
11C30:  3F 2D 75 06 B8 01 00 EB  03 90 2B C0 03 46 0A 8B   ?-u..... ..+..F..
11C40:  56 0C 89 46 F2 89 56 F4  8B 0E 52 0A 39 4E 0E 75   V..F..V. ..R.9N.u
11C50:  5D 8E C2 8B D8 8B F1 26  C6 00 30 03 DE 43 26 C6   ]......& ..0..C&.
11C60:  07 00 EB 4A C4 5E 06 26  FF 77 06 26 FF 77 04 26   ...J.^.& .w.&.w.&
11C70:  FF 77 02 26 FF 37 9A 6A  42 AF 0D 83 C4 08 89 46   .w.&.7.j B......F
11C80:  FC 89 56 FE 52 50 C4 5E  FC 26 8B 47 02 03 46 0E   ..V.RP.^ .&.G..F.
11C90:  50 26 83 3F 2D 75 05 B8  01 00 EB 02 2B C0 03 46   P&.?-u.. ....+..F
```

```
11CA0:  0A 8B 56 0C 52 50 9A B6  26 AF 0D 83 C4 0A 8B 46   ..V.RP.. &......F
11CB0:  0A 8B 56 0C 89 46 F2 89  56 F4 C4 5E FC 26 83 3F   ..V..F.. V..^.&.?
11CC0:  2D 75 0C 8E C2 8B D8 26  C6 07 2D 40 89 46 F2 C4   -u.....& ..-@.F..
11CD0:  5E FC 26 83 7F 02 00 7F  19 FF 76 F4 FF 76 F2 B8   ^.&..... ..v..v..
11CE0:  01 00 50 E8 E6 01 C4 5E  F2 26 C6 07 30 FF 46 F2   ..P....^ .&..0.F.
11CF0:  EB 07 26 8B 47 02 01 46  F2 83 7E 0E 00 7E 61 FF   ..&.G..F ..~..~a.
11D00:  76 F4 FF 76 F2 B8 01 00  50 E8 C0 01 C4 5E F2 26   v..v.... P....^.&
11D10:  C6 07 2E FF 46 F2 C4 5E  FC 26 83 7F 02 00 7D 40   ....F..^ .&....}@
11D20:  80 3E 50 0A 00 74 09 26  8B 47 02 F7 D8 EB 0F 90   .>P..t.& .G......
11D30:  26 8B 47 02 F7 D8 3B 46  0E 7E 03 8B 46 0E 89 46   &.G...;F .~..F..F
11D40:  0E FF 76 F4 FF 76 F2 50  E8 81 01 FF 76 0E B8 30   ..v..v.P ....v..0
11D50:  00 50 FF 76 F4 FF 76 F2  9A 86 2B AF 0D 83 C4 08   .P.v..v. ..+.....
11D60:  8B 46 0A 8B 56 0C 5E 8B  E5 5D CB 90 55 8B EC 83   .F..V.^. .]..U...
11D70:  EC 04 C6 06 50 0A 01 FF  76 0E FF 76 0C FF 76 0A   ....P... v..v..v.
11D80:  FF 76 08 FF 76 06 0E E8  8C FE C6 06 50 0A 00 8B   .v..v... ....P...
11D90:  E5 5D CB 90 55 8B EC 83  EC 0A C4 5E 06 26 FF 77   .]..U... ...^.&.w
11DA0:  06 26 FF 77 04 26 FF 77  02 26 FF 37 9A 6A 42 AF   .&.w.&.w .&.7.jB.
11DB0:  0D 83 C4 08 A3 C0 0D 89  16 C2 0D C4 1E C0 0D 26   ........ .......&
11DC0:  8B 47 02 48 A3 52 0A 06  53 FF 76 0E 26 83 3F 2D   .G.H.R.. S.v.&.?-
11DD0:  75 06 B8 01 00 EB 03 90  2B C0 03 46 0A 8B 56 0C   u....... +..F..V.
11DE0:  89 46 FC 89 56 FE 52 50  9A B6 26 AF 0D 83 C4 0A   .F..V.RP ..&.....
11DF0:  C4 1E C0 0D 26 8B 47 02  48 89 46 FA 3B 06 52 0A   ....&.G. H.F.;.R.
11E00:  7E 04 B0 01 EB 02 2A C0  A2 54 0A 8B 46 FA A3 52   ~.....*. .T..F..R
11E10:  0A 3D FC FF 7C 05 3B 46  0E 7C 1D FF 76 10 FF 76   .=..|.;F .|..v..v
11E20:  0E FF 76 0C FF 76 0A FF  76 08 FF 76 06 0E E8 BB   ..v..v.. v..v....
11E30:  FD 83 C4 0C 8B E5 5D CB  80 3E 54 0A 00 74 14 C4   ......]. .>T..t..
11E40:  5E FC FF 46 FC 26 80 3F  00 75 F4 8B 5E FC 26 C6   ^..F.&.? .u..^.&.
11E50:  47 FE 00 FF 76 0E FF 76  0C FF 76 0A FF 76 08 FF   G...v..v ..v..v..
11E60:  76 06 0E E8 06 FF 8B E5  5D CB 55 8B EC 83 7E 0E   v....... ].U...~.
11E70:  65 74 06 83 7E 0E 45 75  1D FF 76 12 FF 76 10 FF   et..~.Eu ..v..v..
11E80:  76 0C FF 76 0A FF 76 08  FF 76 06 0E E8 D5 FB 8B   v..v..v. .v......
11E90:  E5 8B E5 5D CB 90 83 7E  0E 66 75 16 FF 76 10 FF   ...]...~ .fu..v..
11EA0:  76 0C FF 76 0A FF 76 08  FF 76 06 0E E8 67 FD EB   v..v..v. .v...g..
11EB0:  DE 90 FF 76 12 FF 76 10  FF 76 0C FF 76 0A FF 76   ...v..v. .v..v..v
11EC0:  08 FF 76 06 0E E8 CC FE  8B E5 5D CB 55 8B EC 83   ..v..... ..].U...
11ED0:  7E 04 00 74 25 FF 76 08  FF 76 06 9A 2A 26 AF 0D   ~..t%.v. .v..*&..
11EE0:  8B E5 40 50 FF 76 08 FF  76 06 8B 46 06 8B 56 08   ..@P.v.. v..F..V.
11EF0:  03 46 04 52 50 9A 5E 2A  AF 0D 8B E5 5D C2 06 00   .F.RP.^* ....]...
11F00:  55 8B EC 83 EC 06 B8 CC  0D 1E 50 8D 46 FA 16 50   U....... ..P.F..P
11F10:  FF 76 08 FF 76 06 2B C0  50 E8 EE F6 89 46 FE 8B   .v..v.+. P....F..
11F20:  46 FA 2B 46 06 A3 C6 0D  C7 06 C4 0D 00 00 F6 46   F.+F.... .......F
11F30:  FE 04 74 06 C7 06 C4 0D  00 02 F6 46 FE 02 74 05   ..t..... ...F..t.
11F40:  80 0E C4 0D 01 F6 46 FE  01 74 05 80 0E C5 0D 01   ......F. .t......
11F50:  B8 C4 0D 8C DA 8B E5 5D  CB 90 55 8B EC 56 57 FC   .......] ..U..VW.
11F60:  8C D8 8E C0 8D 76 06 BF  60 0A 36 A5 36 A5 36 A5   .....v.. `.6.6.6.
11F70:  36 A5 BE 60 0A 55 E8 A1  EB 5D BF 68 0A 8B C8 AC   6..`.U.. .].h....
11F80:  98 91 F3 A4 91 AA BF 56  0A 32 FF 89 1D 89 55 02   .......V .2....U.
11F90:  89 4D 04 C7 45 06 68 0A  8C 5D 08 8C DA 8B C7 5F   .M..E.h. .]....._
11FA0:  5E 8B E5 5D CB 00 5A 5A  BA 60 31 8E DA 2A E4 50   ^..]..ZZ .`1..*.P
11FB0:  2D 81 00 A3 9A 0A 9A 9E  02 AF 0D 8B 1E 9A 0A D1   -....... ........
11FC0:  E3 8B 8F 7C 0A BB 94 0A  89 4F 04 9A 56 2C AF 0D   ...|.... .O..V,..
11FD0:  B8 FD 00 50 9A 87 05 AF  0D A1 9A 0A 05 65 00 50   ...P.... .....e.P
11FE0:  9A 87 05 AF 0D 9A DB 01  AF 0D 56 57 8C D8 8E C0   ........ ..VW....
```

```
11FF0:  BE 9C 0A BF BC 08 B9 0C  00 F3 A5 5F 5E CB 55 8B   ........ ..._^.U.
12000:  EC 83 EC 1A C4 5E 06 26  FF 77 08 26 FF 77 06 26   .....^.& .w.&.w.&
12010:  FF 77 04 26 FF 77 02 26  FF 37 8B 46 0E 40 3D 01   .w.&.w.& .7.F.@=.
12020:  00 7D 03 B8 01 00 50 2B  C0 50 8D 46 E6 50 E8 FF   .}....P+ .P.F.P..
12030:  ED FF 76 10 FF 76 0E FF  76 0C FF 76 0A 8D 46 E6   ..v..v.. v..v..F.
12040:  16 50 0E E8 04 00 8B E5  5D CB 55 8B EC 83 EC 0C   .P...... ].U.....
12050:  8B 46 0A 8B 56 0C 89 46  FC 89 56 FE 8B 4E 06 8B   .F..V..F ..V..N..
12060:  5E 08 83 C1 04 89 4E F6  89 5E F8 C4 5E 06 26 80   ^.....N. .^..^.&.
12070:  7F 02 2D 75 0C 8E C2 8B  D8 26 C6 07 2D 40 89 46   ..-u.... .&..-@.F
12080:  FC C4 5E 06 26 80 7F 03  00 74 15 C4 5E F6 FF 46   ..^.&... .t..^..F
12090:  F6 26 8A 07 C4 5E FC FF  46 FC 26 88 07 EB 15 90   .&...^.. F.&.....
120A0:  C4 5E FC FF 46 FC 26 C6  07 30 C4 5E 06 26 FE 47   .^..F.&. .0.^.&.G
120B0:  03 26 FF 07 83 7E 0E 00  7E 49 C4 5E FC FF 46 FC   .&...~.. ~I.^..F.
120C0:  26 C6 07 2E C4 5E 06 26  8A 47 03 98 48 89 46 FA   &....^.& .G..H.F.
120D0:  29 46 0E EB 16 90 C4 5E  F6 FF 46 F6 26 8A 07 C4   )F.....^ ..F.&...
120E0:  5E FC FF 46 FC 26 88 07  FF 4E FA 83 7E FA 00 75   ^..F.&.. .N..~..u
120F0:  E5 EB 0B 90 C4 5E FC FF  46 FC 26 C6 07 30 FF 4E   .....^.. F.&..0.N
12100:  0E 79 F1 83 7E 10 00 74  0D C4 5E FC FF 46 FC 26   .y..~..t ..^..F.&
12110:  C6 07 45 EB 0B 90 C4 5E  FC FF 46 FC 26 C6 07 65   ..E....^ ..F.&..e
12120:  C4 5E 06 26 8B 07 48 89  46 F4 0B C0 7D 12 F7 D8   .^.&..H. F...}...
12130:  89 46 F4 C4 5E FC FF 46  FC 26 C6 07 2D EB 0B 90   .F..^..F .&..-...
12140:  C4 5E FC FF 46 FC 26 C6  07 2B 3D E8 03 7C 1A B9   .^..F.&. .+=..|..
12150:  E8 03 99 F7 F9 04 30 8B  5E FC FF 46 FC 26 88 07   ......0. ^..F.&..
12160:  8B 46 F4 99 F7 F9 89 56  F4 8B 46 F4 B9 64 00 99   .F.....V ..F..d..
12170:  F7 F9 04 30 8B 5E FC FF  46 FC 26 88 07 8B 46 F4   ...0.^.. F.&...F.
12180:  99 F7 F9 89 56 F4 8B C2  B9 0A 00 99 F7 F9 04 30   ....V... .......0
12190:  8B 5E FC FF 46 FC 26 88  07 8B 46 F4 99 F7 F9 80   .^..F.&. ..F.....
121A0:  C2 30 8B 5E FC FF 46 FC  26 88 17 8B 5E FC FF 46   .0.^..F. &...^..F
121B0:  FC 26 C6 07 00 8B 46 0A  8B 56 0C 8B E5 5D CB 90   .&....F. .V...]..
121C0:  55 8B EC 83 EC 1A C4 5E  06 26 FF 77 08 26 FF 77   U......^ .&.w.&.w
121D0:  06 26 FF 77 04 26 FF 77  02 26 FF 37 8B 46 0E 0B   .&.w.&.w .&.7.F..
121E0:  C0 7D 02 2B C0 50 B8 01  00 50 8D 46 E6 50 E8 3F   .}.+.P.. .P.F.P.?
121F0:  EC FF 76 0E FF 76 0C FF  76 0A 8D 46 E6 16 50 0E   ..v..v.. v..F..P.
12200:  E8 05 00 8B E5 5D CB 90  55 8B EC 83 EC 0E 8B 46   .....].. U......F
12210:  0A 8B 56 0C 89 46 FC 89  56 FE C4 5E 06 26 8B 0F   ..V..F.. V..^.&..
12220:  89 4E F4 8D 4F 04 89 4E  F6 8C 46 F8 26 80 7F 02   .N..O..N ..F.&...
12230:  2D 75 0F 8E C2 8B D8 26  C6 07 2D 40 89 46 FC 89   -u.....& ..-@.F..
12240:  56 FE 83 7E F4 00 7E 52  C4 5E 06 26 8A 47 03 98   V..~..~R .^.&.G..
12250:  3B 46 F4 7E 03 8B 46 F4  89 46 FA 29 46 F4 8A 46   ;F.~..F. .F.)F..F
12260:  FA 26 28 47 03 EB 13 90  C4 5E F6 FF 46 F6 26 8A   .&(G.... .^..F.&.
12270:  07 C4 5E FC FF 46 FC 26  88 07 8B 46 FA FF 4E FA   ..^..F.& ...F..N.
12280:  0B C0 75 E4 83 7E F4 00  74 1A FF 4E F4 C4 5E FC   ..u..~.. t..N..^.
12290:  FF 46 FC 26 C6 07 30 EB  EB 90 C4 5E FC FF 46 FC   .F.&..0. ...^..F.
122A0:  26 C6 07 30 83 7E 0E 00  7E 70 C4 5E FC FF 46 FC   &..0.~.. ~p.^..F.
122B0:  26 C6 07 2E C4 5E 06 26  8A 47 03 98 2B 46 F4 F7   &....^.& .G..+F..
122C0:  D8 01 46 0E EB 0A C4 5E  FC FF 46 FC 26 C6 07 30   ..F....^ ..F.&..0
122D0:  8B 46 F4 FF 46 F4 0B C0  7C EC C4 5E 06 26 8A 47   .F..F... |..^.&.G
122E0:  03 98 89 46 FA EB 13 90  C4 5E F6 FF 46 F6 26 8A   ...F.... .^..F.&.
122F0:  07 C4 5E FC FF 46 FC 26  88 07 8B 46 FA FF 4E FA   ..^..F.& ...F..N.
12300:  0B C0 75 E4 EB 0A C4 5E  FC FF 46 FC 26 C6 07 30   ..u....^ ..F.&..0
12310:  8B 46 0E FF 4E 0E 0B C0  7F EC C4 5E FC 26 C6 07   .F..N... ...^.&..
12320:  00 8B 46 0A 8B 56 0C 8B  E5 5D CB 90 55 8B EC 83   ..F..V.. .]..U...
12330:  EC 1A 83 7E 0E 00 7F 05  C7 46 0E 01 00 C4 5E 06   ...~.... .F....^.
```

B_ENROLL.DMP Tuesday, July 13, 1993 1:12 pm Page 89

```
12340:  26 FF 77 08 26 FF 77 06  26 FF 77 04 26 FF 77 02   &.w.&.w. &.w.&.w.
12350:  26 FF 37 FF 76 0E 2B C0  50 8D 46 E6 50 E8 D0 EA   &.7.v.+. P.F.P...
12360:  83 7E E6 FC 7E 08 8B 46  E6 39 46 0E 7D 1E FF 76   .~..~..F .9F.}..v
12370:  10 8B 46 0E 48 50 FF 76  0C FF 76 0A 8D 46 E6 16   ..F.HP.v ..v..F..
12380:  50 0E E8 C5 FC 83 C4 0C  8B E5 5D CB 8B 46 0E 2B   P....... ..]..F.+
12390:  46 E6 50 FF 76 0C FF 76  0A 8D 46 E6 16 50 0E E8   F.P.v..v ..F..P..
123A0:  66 FE 8B E5 5D CB 55 8B  EC 83 7E 0E 65 74 06 83   f...].U. ..~.et..
123B0:  7E 0E 45 75 1D FF 76 12  FF 76 10 FF 76 0C FF 76   ~.Eu..v. .v..v..v
123C0:  0A FF 76 08 FF 76 06 0E  E8 33 FC 8B E5 8B E5 5D   ..v..v.. .3.....]
123D0:  CB 90 83 7E 0E 66 74 06  83 7E 0E 46 75 16 FF 76   ...~.ft. .~.Fu..v
123E0:  10 FF 76 0C FF 76 0A FF  76 08 FF 76 06 0E E8 CF   ..v..v.. v..v....
123F0:  FD EB D8 90 FF 76 12 FF  76 10 FF 76 0C FF 76 0A   .....v.. v..v..v.
12400:  FF 76 08 FF 76 06 0E E8  22 FF 8B E5 5D CB 55 8B   .v..v... "...].U.
12410:  EC 83 EC 0E 8D 46 F6 16  50 8D 4E F2 16 51 FF 76   .....F.. P.N..Q.v
12420:  08 FF 76 06 B9 01 00 51  E8 47 F2 CD 37 6E F6 8B   ..v....Q .G..7n..
12430:  E5 5D CB 90 00 00 00 00  00 00 00 00 00 00 00 00   .]...... ........
12440:  93 14 00 00 00 00 00 00  00 00 00 00 00 00 00 00   ........ ........
12450:  4D 53 45 4D 38 37 06 00  67 66 77 2E 2E 2E 47 57   MSEM87.. gfw...GW
12460:  5C 00 CF 01 AE 01 F0 01  EE 06 07 07 29 07 6E 07   \....... ....).n.
12470:  0B 07 DE 01 56 02 95 02  9A 02 83 FB 0C 77 0F D1   ....V... .....w..
12480:  E3 1E 2E 8E 1E 00 00 2E  FF 97 20 00 1F CB 0D FF   ........ .. .....
12490:  FF 8B D0 EB F8 4E 4F 38  37 3D 0D 0A 16 1E B8 56   .....NO8 7=.....V
124A0:  00 50 9A 91 27 AF 0D 1E  B8 14 00 50 9A 73 27 AF   .P..'... ...P.s'.
124B0:  0D 1E 0B F6 74 72 8E C6  0E 1F 33 FF FC 26 80 3D   ....tr.. ..3..&.=
124C0:  00 74 65 B9 05 00 BE 55  00 F3 A6 74 0B B9 FF 7F   .te....U ...t....
124D0:  32 C0 F2 AE 74 E7 EB 50  B9 FF 7F B0 20 F3 AE 4F   2...t..P .... ..O
124E0:  26 8A 15 0A D2 74 38 33  C0 B9 FF 7F 8B DF F2 AE   &....t83 ........
124F0:  4F 2B FB 8B CF 8B FB 50  8B C4 BB 01 00 53 06 57   O+.....P .....S.W
12500:  51 16 50 9A B0 27 AF 0D  8B C4 BB 01 00 53 0E BF   Q.P..'.. .....S..
12510:  5A 00 57 BB 02 00 53 16  50 9A B0 27 AF 0D 5B 1F   Z.W...S. P..'..[.
12520:  C6 06 04 00 00 EB 7F 90  1F 83 3E 14 00 00 75 42   ........ ..>...uB
12530:  DB E3 51 B9 14 00 E2 FE  59 33 C0 A3 58 00 D9 3E   ..Q..... Y3..X..>
12540:  58 00 51 B9 14 00 E2 FE  59 81 26 58 00 3F 0F 81   X.Q..... Y.&X.?..
12550:  3E 58 00 3F 03 75 12 DD  3E 58 00 51 B9 14 00 E2   >X.?.u.. >X.Q....
12560:  FE 59 40 F7 06 58 00 BF  B8 74 02 33 C0 A2 04 00   .Y@..X.. .t.3....
12570:  EB 0D 1E 68 04 00 6A 03  6A 00 9A 5C 27 AF 0D 80   ...h..j. j..\'...
12580:  3E 04 00 00 74 20 83 3E  14 00 00 75 0A E8 2A 25   >...t .> ...u..*%
12590:  73 14 B8 FE FF F9 C3 6A  10 0E 68 B8 02 1E 68 22   s......j ..h...h"
125A0:  00 9A 88 27 AF 0D 83 3E  14 00 00 75 05 E8 88 00   ...'...> ...u....
125B0:  EB 16 80 3E 04 00 00 75  0F 6A 07 0E 68 98 0C 1E   ...>...u .j..h...
125C0:  68 1E 00 9A 88 27 AF 0D  E8 44 00 B8 32 13 E8 5D   h....'.. .D..2..]
125D0:  05 33 C0 A3 00 00 A3 02  00 B8 98 0E 83 3E 14 00   .3...... .....>..
125E0:  00 74 03 B8 D1 0E A3 A7  00 A0 04 00 98 C3 83 3E   .t...... .......>
125F0:  14 00 00 75 10 E8 88 00  80 3E 04 00 00 74 05 DB   ...u.... .>...t..
12600:  E3 E8 E5 24 C3 FF 36 56  00 9A A7 27 AF 0D C3 80   ...$..6V ...'....
12610:  3E 04 00 00 74 02 DB E3  A1 0E 00 A3 10 00 33 C0   >...t... ......3.
12620:  3A 06 04 00 74 03 9B DB  E2 A3 0C 00 A3 08 00 C3   :...t... ........
12630:  A3 00 00 89 16 02 00 C3  B9 0B 00 B8 34 35 BF 1E   ........ ....45..
12640:  00 CD 21 40 89 1D 8C 45  02 83 C7 04 E2 F3 BA BC   ..!@...E ........
12650:  0C BE 45 0C BF 28 0C 80  3E 04 00 00 74 09 BA 33   ..E..(.. >...t..3
12660:  08 BE FE 07 BF 2B 08 1E  0E 1F B8 34 25 B9 08 00   .....+.. ...4%...
12670:  CD 21 40 E2 FB 8B D6 CD  21 40 8B D7 CD 21 1F C3   .!@..... !@...!..
12680:  B9 0B 00 B8 34 25 BF 1E  00 1E C5 15 CD 21 1F 40   ....4%.. .....!.@
```

```
12690:  83 C7 04 E2 F4 C3 33 D2  80 3E 04 00 00 74 28 83   ......3. .>...t(.
126A0:  EC 0E 8B DC 9B 36 D9 37  9B 36 D9 2F 36 8B 47 04   .....6.7 .6./6.G.
126B0:  83 C4 0E B9 08 00 8B D8  D1 E8 D1 E8 83 E3 03 83   ........ ........
126C0:  FB 03 74 01 42 E2 EF A1  10 00 2B 06 0E 00 B3 0C   ..t.B... ..+.....
126D0:  F6 F3 03 C2 C3 A0 04 00  98 C3 A3 A4 00 C3 80 0E   ........ ........
126E0:  17 00 02 80 3E 04 00 00  74 03 80 CC 02 C3 80 0E   ....>... t.......
126F0:  17 00 04 C3 CF 43 EB 19  50 55 83 EC 1C 8B EC 9B   .....C.. PU......
12700:  D9 76 00 B8 B4 02 87 46  20 89 46 02 53 1E C5 5E   .v.....F  .F.S..^
12710:  06 8B 07 04 28 73 DE 86  C4 89 46 08 EB 10 50 55   ....(s.. ..F...PU
12720:  83 EC 1C 8B EC D9 76 00  9B DB E2 FB 53 1E 2E 8E   ......v. ....S...
12730:  1E 00 00 33 C0 8A 46 02  32 FF 83 3E A4 00 00 75   ...3..F. 2..>...u
12740:  03 80 CF 01 F6 C7 01 75  0A A8 01 74 06 80 CF 01   .......u ...t....
12750:  E9 84 00 A8 02 74 03 E9  FE 01 F6 C7 04 75 0C A8   .....t.. .....u..
12760:  04 74 08 80 CF 04 E8 06  03 EB D9 F6 C7 08 75 0A   .t...... ......u.
12770:  A8 08 74 06 80 CF 08 E9  DF 02 8A 1E 06 00 80 CB   ..t..... ........
12780:  C0 80 E3 FD F6 D3 22 C3  A8 01 74 1F 50 8B 46 08   ......". ..t.P.F.
12790:  80 E4 07 3D FA 01 75 05  58 0C 80 EB 0E 8B 46 08   ...=..u. X.....F.
127A0:  25 38 03 3D 00 01 58 75  02 34 01 9B DB E2 9B D9   %8.=..Xu .4......
127B0:  6E 00 09 06 08 00 1F 5B  83 C4 1C 5D A9 FF BF 75   n......[ ...]...u
127C0:  02 58 C3 50 53 8B DC 36  8B 47 04 36 89 47 06 5B   .X.PS..6 .G.6.G.[
127D0:  58 83 C4 02 E9 FA 02 56  53 51 52 57 8B 5E 04 8B   X......V SQRW.^..
127E0:  4E 02 F7 D3 8A CD 80 E1  38 D0 E9 D0 E9 D3 CB F6   N....... 8.......
127F0:  C7 C0 74 52 8B 56 08 81  F2 E0 01 F6 C2 C0 75 20   ..tR.V.. ......u
12800:  F7 C2 20 01 75 40 F6 C2  10 75 08 F6 C2 08 75 16   .. .u@.. .u....u.
12810:  EB 34 90 80 FA 12 74 0E  80 FA 14 74 09 EB 27 90   .4....t. ...t..'.
12820:  F7 C2 10 01 75 20 80 E7  3F 8B 36 10 00 3B 36 12   ....u .. ?.6..;6.
12830:  00 75 03 E8 A8 FE 83 C6  0C 89 36 10 00 9B D9 F6   .u...... ..6.....
12840:  9B DB 3C E9 05 01 F6 C3  03 74 03 EB 4A 90 8B 56   ..<..... .t..J..V
12850:  08 81 F2 E0 01 F6 C2 C0  74 09 F7 C2 10 01 75 03   ........ t.....u.
12860:  EB 35 90 0B DB 74 06 E8  C0 00 EB 2B 90 8B 36 10   .5...t.. ...+..6.
12870:  00 3B 36 0E 00 75 03 E9  BE 00 80 CB 03 9B D9 F7   .;6..u.. ........
12880:  9B DB 2C 8B 36 10 00 3B  36 0E 00 75 03 E8 5E FE   ..,.6..; 6..u..^.
12890:  83 EE 0C 89 36 10 00 F6  C3 0C 75 50 8B F3 83 E6   ....6... ..uP....
128A0:  F0 0B F6 74 1A 9B DB 3E  4A 00 D1 EB D1 EB E8 79   ...t...> J......y
128B0:  00 9B DB 2E 4A 00 D1 E3  D1 E3 80 CB 03 EB 2D 8B   ....J... ......-.
128C0:  36 10 00 3B 36 0E 00 74  23 80 CB 0C 9B D9 F7 9B   6..;6..t #.......
128D0:  D9 F7 9B DB 2C 9B D9 F6  8B 36 10 00 3B 36 0E 00   ....,... .6..;6..
128E0:  75 03 E8 09 FE 83 EE 0C  89 36 10 00 8B 56 08 81   u....... .6...V..
128F0:  F2 E0 01 F6 C2 C0 75 0B  F7 C2 20 01 75 19 F6 C2   ......u. .. .u...
12900:  10 75 03 EB 46 90 8A CA  80 E1 0F BA C4 50 D3 E2   .u..F... .....P..
12910:  79 F1 F6 C3 0C 75 EC 83  E2 07 D0 E2 8B CA 8B D3   y....u.. ........
12920:  D3 CA F6 C2 03 75 24 EB  0F 90 D1 CB D1 CB 9B D9   .....u$. ........
12930:  F7 F7 C3 03 00 74 F3 C3  80 CC 04 C6 46 02 00 9B   .....t.. ....F...
12940:  D9 66 00 5F 5A 59 5B 5E  E9 67 FE 24 FE E8 1F 01   .f._ZY[^ .g.$....
12950:  5F 5A 59 5B 5E E9 EC FD  80 0E 08 00 02 51 8B 4E   _ZY[^... .....Q.N
12960:  08 80 E1 C0 80 F9 C0 74  6D 8B 4E 08 81 E1 38 03   .......t m.N...8.
12970:  83 F9 08 74 0D 83 F9 10  74 08 80 E1 30 83 F9 30   ...t.... t...0..0
12980:  75 54 F6 C7 C0 74 1D 80  E7 3F 8B 36 10 00 3B 36   uT...t.. .?.6..;6
12990:  12 00 75 03 E8 47 FD 83  C6 0C 89 36 10 00 9B D9   ..u..G.. ...6....
129A0:  F6 9B DB 3C 8B 4E 08 51  81 E1 00 04 81 C1 04 01   ...<.N.Q ........
129B0:  89 4E 08 E8 C1 00 E8 5E  00 59 83 E1 38 80 F9 08   .N.....^ .Y..8...
129C0:  74 08 80 F9 10 74 2E 80  F1 08 81 C9 C1 06 89 4E   t....t.. .......N
129D0:  08 E8 9B 00 EB 3B 8B 4E  08 81 E1 38 07 81 F9 28   .....;.N ...8...(
```

```
129E0:  03 74 0D 81 E1 38 01 81  F9 00 01 74 03 E8 7F 00   .t...8.. ...t....
129F0:  E8 24 00 EB 1C 80 CC 40  9B DB E2 9B D9 C9 9B D8   .$.....@ ........
12A00:  D1 9B D9 C9 9B DD D8 9B  DD 3E 16 00 9B 0A 06 16   ........ .>......
12A10:  00 59 24 FD E9 2D FD 9B  DB 7E 12 9B 8B 4E 1A F7   .Y$..-.. .¯...N..
12A20:  C1 FF 7F 74 21 F6 46 19  80 75 16 9B DF 6E 12 9B   ...t!.F. .u...n..
12A30:  DB 7E 12 9B 83 7E 1A 00  74 0C 81 E9 3E 40 01 4E   .¯...¯.. t...>@.N
12A40:  1A 9B DB 6E 12 C3 33 C9  89 4E 12 89 4E 14 89 4E   ...n..3. .N..N..N
12A50:  16 89 4E 18 89 4E 1A EB  E8 50 8B 46 08 25 C0 01   ..N..N.. .P.F.%..
12A60:  80 F4 01 3D C0 00 58 73  03 E8 03 00 E9 D5 FC F6   ...=..Xs ........
12A70:  C4 40 75 5C 80 CC 40 1E  57 56 51 53 9B DB E2 8C   .@u\..@. WVQS....
12A80:  D7 83 3E 14 00 00 74 04  8B 3E 56 00 8B 4E 08 8B   ..>...t. .>V..N..
12A90:  D9 80 E5 07 80 CD D8 80  E3 C0 80 F3 C0 74 09 80   ........ .....t..
12AA0:  E1 38 80 C9 04 C5 76 0A  86 E9 89 7E 14 8D 7E 16   .8....v. ...¯..¯.
12AB0:  89 7E 12 C6 46 16 9B 89  4E 17 C6 46 19 CB FF 5E   .¯..F... N..F...^
12AC0:  12 5B 59 5E 5F 1F 9B DD  3E 16 00 9B 0A 06 16 00   .[Y^_... >.......
12AD0:  C3 1E 53 B3 8B F6 C4 04  75 38 B3 8A F6 C4 02 75   ..S..... u8.....u
12AE0:  31 B3 88 A8 80 75 2B B3  89 F6 C4 01 75 24 B3 81   1....u+. ....u$..
12AF0:  A8 01 75 1E B3 83 A8 04  75 18 B3 84 A8 08 75 12   ..u..... u.....u.
12B00:  B3 85 A8 10 75 0C B3 86  A8 20 75 06 B3 87 A8 40   ....u... . u....@
12B10:  75 00 2E 8E 1E 00 00 A1  00 00 0B 06 02 00 75 05   u....... ......u.
12B20:  93 B4 4C CD 21 93 5B FF  1E 00 00 1F 58 CF A3 06   ..L.!.[. ....X...
12B30:  00 25 3C FF 80 3E 04 00  00 74 08 A3 1A 00 9B D9   .%<..>.. .t......
12B40:  2E 1A 00 A3 0A 00 C3 A1  06 00 C3 33 C0 3A 06 04   ........ ...3.:..
12B50:  00 74 0B 9B DD 3E 16 00  9B A0 16 00 24 3F 0B 06   .t...>.. ....$?..
12B60:  08 00 25 FF 1F A3 08 00  C3 25 00 0C 80 3E 04 00   ..%..... .%...>..
12B70:  00 74 20 9B D9 3E 0A 00  9B 8B 0E 0A 00 80 E5 F3   .t ..>.. ........
12B80:  0B C1 A3 1A 00 9B D9 2E  1A 00 9B D9 FC 9B D9 2E   ........ ........
12B90:  0A 00 C3 8B 0E 0A 00 51  80 E5 F3 0A E5 88 26 0B   .......Q ......&.
12BA0:  00 55 E8 EA 15 5D 8F 06  0A 00 E8 67 00 C3 25 00   .U...].. ...g..%.
12BB0:  0C 80 3E 04 00 00 74 29  9B D9 3E 0A 00 9B 8B 0E   ..>...t) ..>.....
12BC0:  0A 00 80 E5 F3 0B C1 A3  1A 00 9B D9 2E 1A 00 9B   ........ ........
12BD0:  DB 1E 1A 00 9B D9 2E 0A  00 A1 1A 00 8B 16 1C 00   ........ ........
12BE0:  C3 8B 0E 0A 00 51 80 E5  F3 0A E5 88 26 0B 00 55   .....Q.. ....&..U
12BF0:  E8 64 14 5D 8B C2 8B D3  E8 19 00 8B 36 10 00 3B   .d.].... ....6..;
12C00:  36 0E 00 75 03 E8 E6 FA  83 EE 0C 89 36 10 00 8F   6..u.... ....6...
12C10:  06 0A 00 C3 8B 0E 16 00  09 0E 08 00 08 0E 0C 00   ........ ........
12C20:  F6 D1 8A 2E 06 00 80 CD  C2 80 E5 3F 0A CD F6 D1   ........ ...?....
12C30:  8A 2E 17 00 F7 C1 FF DF  74 D9 91 E9 93 FE FB 9B   ........ t.......
12C40:  50 55 1E 56 8B EC C5 76  08 8A 04 80 0C C0 4E 4E   PU.V...v ......NN
12C50:  89 76 08 D0 E8 D0 E8 D0  E8 F6 D0 24 18 0C 26 86   .v...... ...$..&.
12C60:  C4 B0 9B 89 04 53 BB 01  00 EB 20 FB 9B 50 B8 3D   .....S.. .. ..P.=
12C70:  A2 EB 06 FB 9B 50 B8 32  5C 55 1E 56 8B EC C5 76   .....P.2 \U.V...v
12C80:  08 4E 4E 89 76 08 29 04  53 33 DB 54 58 3B C4 75   .NN.v.). S3.TX;.u
12C90:  28 8B 40 01 25 FB 30 3D  D9 30 75 07 8A 40 02 3C   (.@.%.0= .0u..@.<
12CA0:  F0 72 16 8B 40 01 25 FF  FE 3D DB E2 74 0B 8B 40   .r..@.%. .=..t..@
12CB0:  01 3D DF E0 74 03 C6 04  90 5B 5E 1F 5D 58 CF 90   .=..t... .[^.]X..
12CC0:  5C 0D 12 0D 40 0D B4 0D  5A 0D 14 0D 42 0D B4 0D   \...@... Z...B...
12CD0:  52 0D 04 0D 32 0D B4 0D  50 0D 02 0D 30 0D B4 0D   R...2... P...0...
12CE0:  64 0D 1A 0D 48 0D B4 0D  F0 0C 18 0D 46 0D B4 0D   d...H... ....F...
12CF0:  60 0D F4 0C 22 0D B4 0D  EC 0C 16 0D 44 0D B4 0D   `..."... ....D...
12D00:  36 10 1C 10 F3 1F EE 1F  16 10 10 10 24 10 2E 10   6....... ....$...
12D10:  26 0F 09 10 30 0F 3A 0F  09 10 5B 0F 09 10 65 0F   &...0.:. ..[...e.
12D20:  6F 0F E7 0F FF 0F F0 0F  7B 0F C3 0F CF 0F DB 0F   o....... {.......
```

```
12D30:  A9 16 B5 1B 92 18 00 1B  64 17 0B 1C C0 19 68 1B   ........ d.....h.
12D40:  90 1F 4A 1E 09 10 6D 1C  99 1F 4A 1F A0 1F C7 1C   ..J...m. ..J.....
12D50:  F2 20 D9 20 DE 20 D4 20  E3 20 E8 20 ED 20 09 10   . . . .  . . . ..
12D60:  43 25 6B 25 89 24 B5 24  09 10 09 10 09 10 09 10   C%k%.$.$ ........
12D70:  B8 21 11 26 CE 22 09 10  4F 1D A7 1F 09 10 09 10   .!.&."..  O.......
12D80:  18 20 62 20 54 20 68 20  6F 20 3F 20 54 20 68 20   . b T h  o ? T h
12D90:  54 20 54 20 54 20 54 20  5B 20 5B 20 54 20 76 20   T T T T  [ [ T v
12DA0:  62 20 3F 20 54 20 5B 20  EF 10 59 10 6D 10 5D 10   b ? T [  ..Y.m.].
12DB0:  5D 10 59 10 6D 10 5D 10  6B 10 6B 10 D3 10 6B 10   ].Y.m.]. k.k...k.
12DC0:  59 10 59 10 6D 10 C6 10  1F 12 74 10 6D 10 88 10   Y.Y.m... ..t.m...
12DD0:  74 10 74 10 6D 10 92 10  6B 10 6B 10 D3 10 6B 10   t.t.m... k.k...k.
12DE0:  88 10 92 10 6D 10 88 10  A0 13 74 10 6D 10 88 10   ....m... ..t.m...
12DF0:  83 10 8D 10 64 10 83 10  6B 10 6B 10 D3 10 6B 10   ....d... k.k...k.
12E00:  74 10 74 10 6D 10 92 10  04 06 40 42 01 03 05 07   t.t.m... ..@B....
12E10:  00 00 00 00 00 00 00 00  01 C0 00 01 00 00 00 00   ........ ........
12E20:  00 00 00 00 00 40 00 03  00 00 00 00 00 00 00 C0   .....@.. ........
12E30:  00 40 80 02 FF FF FF FF  FF FF FF FF FF 3F 00 00   .@...... .....?..
12E40:  00 00 80 7F FF FF 7F 7F  00 00 00 00 00 00 F0 7F   ........ ........
12E50:  FF FF FF FF FF FF EF 7F  00 00 00 00 00 00 00 80   ........ ........
12E60:  01 C0 00 01 00 00 00 00  00 00 00 80 00 00 00 00   ........ ........
12E70:  8A B1 6A F6 F4 A2 30 89  FE FF 00 00 9E 53 65 C2   ..j...0. .....Se.
12E80:  42 D7 B3 DD 00 00 00 00  23 2C 9B 6B C1 91 0A 86   B....... #,.k....
12E90:  FF FF 00 00 84 64 DE F9  33 F3 04 B5 00 00 00 00   .....d.. 3.......
12EA0:  00 00 00 00 00 00 00 80  01 00 00 00 35 C2 68 21   ........ ....5.h!
12EB0:  A2 DA 0F C9 01 00 00 00  FE 8A 1B CD 4B 78 9A D4   ........ ....Kx..
12EC0:  01 00 00 00 BC F0 17 5C  29 3B AA B8 00 00 00 00   .......\ );......
12ED0:  99 F7 CF FB 84 9A 20 9A  FE FF 00 00 AC 79 CF D1   ...... . .....y..
12EE0:  F7 17 72 B1 FF FF 00 00  03 00 D4 7B 5A D8 3E 5C   ..r..... ...{Z.>\
12EF0:  69 8F 05 00 80 00 37 4D  D7 2C F8 D0 D4 D6 0C 00   i.....7M .,......
12F00:  00 00 D3 DC 17 66 EE BB  BA 82 12 00 80 00 CB 91   .....f.. ........
12F10:  58 5E 8B 86 06 F5 14 00  00 00 03 00 E5 86 20 01   X^...... ...... .
12F20:  02 05 79 9C 09 00 80 00  63 66 CF 88 70 B2 39 C9   ..y..... cf..p.9.
12F30:  0F 00 00 00 96 FA 46 C7  FE 0C B7 E4 13 00 80 00   ......F. ........
12F40:  CB 91 58 5E 8B 86 06 F5  14 00 00 00 04 00 32 5B   ..X^.... ......2[
12F50:  08 CF C9 A4 50 A6 FD FF  00 00 CE D1 CA D5 4B A8   ....P... ......K.
12F60:  F0 D0 02 00 00 00 9F 89  2B E2 A8 52 4A 9C 05 00   ........ +..RJ...
12F70:  00 00 65 42 50 55 CF E9  EF 90 06 00 00 00 90 4B   ..eBPU.. .......K
12F80:  AD 24 E6 E5 43 A4 05 00  00 00 03 00 10 83 38 56   .$..C... ......8V
12F90:  0A 4F 62 F0 03 00 00 00  E7 B4 1E 6D 90 51 50 EE   .Ob..... ...m.QP.
12FA0:  05 00 00 00 3B 24 6D 5B  20 90 50 AC 06 00 00 00   ....;$m[  .P.....
12FB0:  90 4B AD 24 E6 E5 43 A4  05 00 00 00 02 00 98 18   .K.$..C. ........
12FC0:  05 F4 FC 06 74 F2 05 00  00 00 08 AD E1 14 54 3D   ....t... ......T=
12FD0:  9B EC 0E 00 00 00 AF 5F  A3 C3 4A D8 F0 FD 14 00   ......._ ..J.....
12FE0:  00 00 02 00 6F 77 7B 38  8B 10 A7 DA 0A 00 00 00   ....ow{8 ........
12FF0:  5D E8 7B 9B 82 B1 03 A0  12 00 00 00 7E 83 09 E7   ].{..... ....~...
13000:  14 F8 2D B7 16 00 00 00  03 00 04 77 99 C2 E2 57   ..-..... ...w...W
13010:  71 9B FE FF 00 00 9C 4F  31 F6 35 5E 91 DE 04 00   q......O 1.5^....
13020:  80 00 8A 4B EA 7A ED C9  D3 B2 08 00 00 00 C9 28   ...K.z.. .......(
13030:  09 1D 2F E4 C4 8A 0A 00  80 00 02 00 BB 76 70 3E   ../..... .....vp>
13040:  5B 02 AC 8E 05 00 80 00  60 EF 33 A9 D0 1F 04 9C   [....... `.3.....
13050:  08 00 00 00 96 BB 83 6C  E0 F4 5F C0 09 00 80 00   .......l .._.....
13060:  71 0C 80 0C 76 0C 7C 0C  55 1E 56 8B EC C5 76 06   q...v.|. U.V...v.
13070:  4E 4E 89 76 06 C7 04 89  C0 5E 1F 5D CF 71 0C 7C   NN.v.... .^.].q.|
```

```
13080:  0C 76 0C 80 0C FB 50 06  1E 57 56 52 51 53 83 EC   .v....P. .WVRQS..
13090:  02 55 8B EC FC 8B D3 8B  C7 C5 7E 14 47 47 8B 4D   .U...... ..¯.GG.M
130A0:  FE 8B D9 D0 C3 D0 C3 83  E3 03 D1 C3 2E FF A7 3D   ........ .......=
130B0:  0C 8E 46 0E EB 0A 8C DB  8E C3 EB 04 8C D3 8E C3   ..F..... ........
130C0:  8C 46 02 EB 57 8B D3 8A  D9 C0 EB 02 83 E3 06 47   .F..W... .......G
130D0:  8B 4D FE 2E FF A7 20 0C  FC 50 06 1E 57 56 52 51   .M.... . .P_.WVRQ
130E0:  53 16 55 8B EC 8C DA 8B  C7 C5 7E 14 8B 0D 83 C7   S.U..... ..¯.....
130F0:  02 80 C1 28 73 CF 8E C2  8B D3 EB 20 FB 50 06 1E   ...(s... ... .P..
13100:  57 56 52 51 53 16 55 8B  EC 8C D8 8E C0 FC 8B D3   WVRQS.U. ........
13110:  8B C7 C5 7E 14 47 8B 4D  FE 80 E9 34 D0 C5 D0 C5   ...¯.G.M ...4....
13120:  8A DD 83 E3 1F D1 E3 2E  FF A7 80 08 8B F2 EB 74   ........ .......t
13130:  8B F0 EB 70 8B 76 00 8E  46 02 8A 05 98 47 03 F0   ...p.v.. F....G..
13140:  EB 62 8B F0 03 76 00 8E  46 02 8A 05 98 47 03 F0   .b...v.. F....G..
13150:  EB 52 8B C6 03 D0 8B C2  8B F0 8A 05 98 47 03 F0   .R...... .....G..
13160:  EB 42 8B 76 00 8E 46 02  03 35 83 C7 02 EB 35 90   .B.v..F. .5....5.
13170:  8B F0 03 76 00 8E 46 02  03 35 83 C7 02 EB 25 90   ...v..F. .5....%.
13180:  8B C6 03 D0 8B C2 8B F0  03 35 83 C7 02 EB 15 90   ........ .5......
13190:  8B F0 03 76 00 8E 46 02  EB 0A 8B F0 03 F2 EB 04   ...v._F. ........
131A0:  8B 35 47 47 89 7E 14 8A  1D 2E 8E 1E 00 00 88 1E   .5GG.¯.. ........
131B0:  A6 00 C7 06 16 00 00 20  D0 ED D0 ED D0 ED D0 ED   .......  ........
131C0:  8A DD 83 E3 0E F6 C1 01  74 0A B8 74 0E 50 2E FF   ........ t..t.P..
131D0:  A7 D0 08 90 53 8B D9 83  E3 06 2E FF 97 F0 08 5B   ....S... .......[
131E0:  8C D8 8E C0 8B 36 10 00  8B FE 83 EF 0C 89 3E 96   .....6.. ......>.
131F0:  00 EB 52 90 89 7E 14 8A  1D 33 C0 2E 8B 3E 00 00   ..R..¯.. .3...>..
13200:  8E DF 8E C7 88 1E A6 00  A3 16 00 8A DD D0 EB D0   ........ ........
13210:  EB D0 EB D0 EB 83 E3 0E  F6 C1 01 74 09 2E FF 97   ........ ...t....
13220:  E0 08 E9 8F 00 90 E8 4C  00 72 40 89 36 96 00 F6   .......L .r@.6...
13230:  C1 04 74 04 89 3E 96 00  F6 C3 08 74 03 80 F3 02   ..t..>.. ...t....
13240:  F6 C1 02 74 1D 2E FF 97  C0 08 8B 36 10 00 3B 36   ...t.... ...6..;6
13250:  0E 00 74 09 83 EE 0C 89  36 10 00 EB 57 E8 8E F4   ..t..... 6...W...
13260:  EB F2 B8 74 0E 50 2E FF  A7 C0 08 E8 80 F4 83 0E   ...t.P.. ........
13270:  16 00 01 EB 3F 8B 36 10  00 8B FE 8A D5 80 E2 1C   ....?.6. ........
13280:  8A F2 D0 E6 02 D6 32 F6  2B FA 3B 3E 0E 00 F8 7F   ......2. +.;>....
13290:  01 F5 C3 E8 B3 01 EB 1C  90 5D 83 C4 02 5B 59 5A   ........ .]...[YZ
132A0:  5E 5F 1F 07 E9 2A F8 5D  83 C4 02 5B 59 5A 5E 5F   ^_...*.] ...[YZ^_
132B0:  1F 07 58 CF A1 16 00 09  06 08 00 08 06 0C 00 F6   ..X..... ........
132C0:  D0 8A 3E 06 00 80 CF C2  80 E7 3F 0A C7 F6 D0 A9   ..>..... ..?.....
132D0:  FF DF 75 C5 FF 26 A7 00  80 3E A6 00 CD 75 C8 8B   ..u..&.. .>...u..
132E0:  EC C5 7E 14 83 C7 03 8B  4D FE 80 E9 34 80 F9 07   ..¯..... M...4...
132F0:  77 B5 8B 46 0C 8B 56 04  8B 76 0A 8E 46 0E 8C 56   w..F..V. .v..F..V
13300:  02 D0 C5 D0 C5 8A DD 83  E3 1F D1 E3 2E FF A7 80   ........ ........
13310:  08 8A 0E A6 00 80 F9 9B  74 14 80 F9 90 74 0F 80   ........ t._..t..
13320:  F1 20 80 F9 F8 72 80 8B  EC C5 7E 14 EB 10 8B EC   . ...r.. ..¯.....
13330:  C5 7E 14 47 8A 0D 80 F1  20 80 F9 F8 72 E7 8A 6D   .¯.G....  ...r..m
13340:  01 83 C7 02 80 C1 08 8B  46 0C 8B 56 04 8B 76 0A   ........ F..V..v.
13350:  8E 46 0E 8C 56 02 D0 C5  D0 C5 8A DD 83 E3 1F D1   .F..V... ........
13360:  E3 2E FF A7 80 08 8B D9  83 E3 06 2E FF A7 F0 08   ........ ........
13370:  8B D9 83 E3 06 2E FF A7  F8 08 8B D9 83 E3 06 2E   ........ ........
13380:  FF 97 F8 08 8B 36 10 00  3B 36 0E 00 76 08 83 EE   .....6.. ;6..v...
13390:  0C 89 36 10 00 C3 E8 55  F3 EB F3 8B D9 83 E3 06   ..6....U ........
133A0:  2E FF A7 00 09 8B D9 83  E3 06 2E FF A7 08 09 F7   ........ ........
133B0:  C1 06 00 75 03 E9 EA 11  E9 A1 11 F7 C1 06 08 74   ...u.... .......t
133C0:  24 81 F1 03 02 F7 C1 03  06 75 11 81 F9 04 81 74   $....... .u.....t
```

```
133D0:  07 C7 06 0C 00 00 00 C3  54 58 3B C4 75 6B A1 0C   ........ TX;.uk..
133E0:  00 89 46 12 C3 F7 C1 00  10 74 0C F7 C1 00 04 75   ..F..... .t.....u
133F0:  03 E9 09 11 E9 E8 10 F7  C1 00 04 75 03 E9 C7 0F   ........ ...u....
13400:  E9 BB 0F 8A DD D0 EB 83  E3 0E 2E FF A7 10 09 8A   ........ ........
13410:  DD D0 EB 83 E3 0E 2E FF  A7 20 09 8A DD D0 EB 83   ........ . ......
13420:  E3 0E 2E FF A7 30 09 F7  C1 06 00 75 1C E9 50 11   .....0.. ...u..P.
13430:  80 F1 04 F7 C1 06 00 75   10 B8 01 00 E9 8A 11 F6   .......u ........
13440:  C1 06 74 05 33 C0 E9 80  11 83 0E 16 00 40 C3 90   ..t.3... .....@..
13450:  BA 00 80 EB 23 90 BA 80  00 EB 1D 90 33 D2 BB 88   ....#... ....3...
13460:  09 EB 18 90 33 D2 87 F7  BB A8 09 EB 0E 90 33 D2   ....3... ......3.
13470:  BB A8 09 EB 06 90 33 D2  BB 68 09 8A 45 0B D0 E0   ......3. .h..E...
13480:  D0 E0 0A 44 0B 98 D1 E0  03 D8 32 75 0A 32 54 0A   ...D.... ..2u.2T.
13490:  8B 4D 08 8B 44 08 2E FF  27 8B F7 8A D6 E8 51 00   .M..D... '.....Q.
134A0:  88 55 0A C3 83 0E 16 00  04 EB 02 8B F7 83 0E 16   .U...... ........
134B0:  00 01 EB 3D BE D0 09 32  F2 80 E6 80 E8 1B 00 08   ...=...2 ........
134C0:  75 0A C3 83 0E 16 00 04  BE DC 09 EB EA 83 0E 16   u....... ........
134D0:  00 04 BE E8 09 83 0E 16  00 01 8B 3E 96 00 2E A5   ........ ...>....
134E0:  2E A5 2E A5 2E A5 2E A5  2E A5 83 EF 0C 83 EE 0C   ........ ........
134F0:  C3 8B 3E 96 00 3B F7 74  0C A5 A5 A5 A5 A5 A5 83   ..>..;.t ........
13500:  EF 0C 83 EE 0C C3 F6 06  0B 00 10 74 C5 32 D6 78   ........ ...t.2.x
13510:  C1 EB 86 8B C6 8B DF 83  C6 06 83 C7 06 B9 04 00   ........ ........
13520:  FD F3 A7 FC 72 04 8B F0  EB 83 8B F3 E9 7E FF 2B   ....r... .....~.+
13530:  C1 7C 08 87 F7 86 F2 03  C8 F7 D8 F7 D8 3D 43 00   .|...... .....=C.
13540:  7E 2F 55 52 8B 75 08 BD  01 00 32 D6 79 02 F7 DD   ~/UR.u.. ..2.y...
13550:  8B 15 8B 4D 02 8B 5D 04  8B 7D 06 0B ED 78 03 E9   ...M..]. .}...x..
13560:  60 04 83 EA 01 83 D9 00  83 DB 00 83 DF 00 E9 8B   `....... ........
13570:  03 55 52 51 32 D6 9C 8B  E8 AD 8B D0 AD 8B C8 AD   .URQ2... ........
13580:  8B D8 AD 33 F6 87 EE 0B  F6 74 70 83 FE 0E 7C 1A   ...3.... .tp...|.
13590:  0B ED 74 03 83 CA 01 8B  EA 8B D1 8B CB 8B D8 33   ..t..... .......3
135A0:  C0 83 EE 10 77 E5 74 53  72 29 83 FE 06 7C 33 95   ....w.tS r)...|3.
135B0:  0A C0 74 03 80 CC 01 8A  C4 8A E2 95 8A D6 8A F1   ..t..... ........
135C0:  8A CD 8A EB 8A DF 8A F8  8A C4 32 E4 83 EE 08 77   ........ ..2....w
135D0:  11 74 28 D1 E5 D1 D2 D1  D1 D1 D3 D1 D0 46 75 F3   .t(..... .....Fu.
135E0:  EB 19 87 CE F7 C5 3F 00  74 03 83 CD 20 D1 E8 D1   ......?. t... ...
135F0:  DB D1 DE D1 DA D1 DD E2  F4 8B CE 8B F7 8B F8 F7   ........ ........
13600:  C5 FF 3F 74 03 83 CD 01  9D 58 78 22 03 14 13 4C   ..?t.... .Xx"...L
13610:  02 13 5C 04 13 7C 06 73  10 D1 DF D1 DB D1 D9 D1   ..\..|.s ........
13620:  DA D1 DD 73 03 83 CD 01  40 8B F0 E9 94 03 2B 14   ...s.... @.....+.
13630:  1B 4C 02 1B 5C 04 1B 7C  06 73 1A 33 F6 F7 D7 F7   .L..\..| .s.3....
13640:  D3 F7 D1 F7 D2 F7 DD F5  13 D6 13 CE 13 DE 13 FE   ........ ........
13650:  8B F0 E9 A7 02 8B F0 58  80 F4 80 50 E9 9D 02 55   .......X ...P...U
13660:  8A FE 32 F2 52 03 C1 40  50 22 FA 33 DB 8B EB 8B   ..2.R..@ P".3....
13670:  CB 8B 04 0B C0 74 0C 8B  15 0B D2 74 06 F7 E2 8B   .....t.. ...t....
13680:  E8 8B CA 55 33 ED 8B 04  0B C0 74 10 8B 55 02 0B   ...U3... ..t..U..
13690:  D2 74 09 F7 E2 03 C8 13  DA 83 D5 00 8B 44 02 0B   .t...... .....D..
136A0:  C0 74 0F 8B 15 0B D2 74  09 F7 E2 03 C8 13 DA 83   .t.....t ........
136B0:  D5 00 58 0B C1 50 33 C9  8B 04 0B C0 74 10 8B 55   ..X..P3. ....t..U
136C0:  04 0B D2 74 09 F7 E2 03  D8 13 EA 83 D1 00 8B 44   ...t.... .......D
136D0:  02 0B C0 74 10 8B 55 02  0B D2 74 09 F7 E2 03 D8   ...t..U. ..t.....
136E0:  13 EA 83 D1 00 8B 44 04  0B C0 74 0F 8B 15 0B D2   ......D. ..t.....
136F0:  74 09 F7 E2 03 D8 13 EA  83 D1 00 58 0B C3 50 33   t....... ...X..P3
13700:  DB 8B 04 0B C0 74 0A F7  65 06 03 E8 13 CA 83 D3   .....t.. e.......
13710:  00 8B 44 02 0B C0 74 10  8B 55 04 0B D2 74 09 F7   ..D...t. .U...t..
```

```
13720:  E2 03 E8 13 CA 83 D3 00  8B 44 04 0B C0 74 10 8B   ........ .D...t..
13730:  55 02 0B D2 74 09 F7 E2  03 E8 13 CA 83 D3 00 8B   U...t... ........
13740:  44 06 8B 15 0B D2 74 09  F7 E2 03 E8 13 CA 83 D3   D.....t. ........
13750:  00 8B D5 81 E5 FF 3F 58  0B C5 50 33 ED 52 8B 44   ......?X ..P3.R.D
13760:  02 0B C0 74 0A F7 65 06  03 C8 13 DA 83 D5 00 8B   ...t..e. ........
13770:  44 04 0B C0 74 10 8B 55  04 0B D2 74 09 F7 E2 03   D...t..U ...t....
13780:  C8 13 DA 83 D5 00 8B 44  06 8B 55 02 0B D2 74 09   .......D ..U...t.
13790:  F7 E2 03 C8 13 DA 83 D5  00 51 33 C9 8B 44 04 0B   ........ .Q3..D..
137A0:  C0 74 0A F7 65 06 03 D8  13 EA 83 D1 00 8B 44 06   .t..e... ......D.
137B0:  8B 55 04 0B D2 74 09 F7  E2 03 D8 13 EA 83 D1 00   .U...t.. ........
137C0:  8B 44 06 F7 65 06 03 C5  13 D1 59 5D 8B FA 8B D1   .D..e... ..Y]....
137D0:  8B CB 8B D8 58 0B C0 74  03 83 CD 01 5E E9 D0 01   ....X..t ....^...
137E0:  F9 1B C1 32 F2 55 52 56  57 83 C6 06 83 C7 06 B9   ...2.URV W.......
137F0:  04 00 FD F3 A7 FC 5F 5E  9C 8B E8 AD 8B C8 AD 8B   ......_^ ........
13800:  D8 AD 8B D0 AD 92 8B F7  BF 98 00 A5 A5 A5 A5 33   ........ .......3
13810:  FF 9D 72 0B D1 EA D1 D8  D1 DB D1 D9 D1 DF 45 55   ..r..... ......EU
13820:  89 3E 1A 00 E8 4A 00 57  C7 06 1A 00 00 00 E8 40   .>...J.W .......@
13830:  00 57 E8 3C 00 57 E8 38  00 BD 01 80 D1 E1 D1 D3   .W.<.W.8 ........
13840:  D1 D0 D1 D2 72 22 BE 98  00 3B 54 06 75 0C 3B 44   ....r".. .;T.u.;D
13850:  04 75 07 3B 5C 02 75 02  3B 0C 73 0C 0B C2 0B C1   .u.;\.u. ;.s.....
13860:  0B C3 0A C4 32 E4 8B E8  8B D7 59 5B 5F 5E E9 51   ....2... ..Y[_^.Q
13870:  01 8B 36 9E 00 33 FF 3B  D6 73 62 0B D2 75 04 3B   ..6..3.; .sb..u.;
13880:  F0 77 41 F7 F6 52 53 97  33 ED 8B F5 A1 98 00 0B   .wA..RS. 3.......
13890:  C0 74 04 F7 E7 8B F2 50  A1 9A 00 0B C0 74 06 F7   .t.....P .....t..
138A0:  E7 03 F0 13 EA A1 9C 00  0B C0 74 08 F7 E7 03 E8   ........ ..t.....
138B0:  83 D2 00 92 8B 16 1A 00  5B 2B D3 1B CE 5B 1B DD   ........ [+...[..
138C0:  5D 1B E8 95 92 91 93 73  13 4F 03 0E 98 00 13 1E   ]......s .O......
138D0:  9A 00 13 06 9C 00 13 16  9E 00 73 ED C3 4F 2B 0E   ........ ..s..O+.
138E0:  98 00 1B 1E 9A 00 1B 06  9C 00 03 0E 9A 00 13 1E   ........ ........
138F0:  9C 00 13 C2 8B 16 98 00  F5 EB C9 90 B0 04 0B FF   ........ ........
13900:  75 20 83 EE 10 FE C8 74  0C 8B FB 8B D9 8B CA 8B   u .....t ........
13910:  D5 33 ED EB E9 BE D0 09  8B 3E 96 00 58 5D E9 BD   .3...... .>..X]..
13920:  FB 90 F7 C7 00 FF 75 1C  83 EE 08 97 8A E0 8A C7   ......u. ........
13930:  8A FB 8A DD 8A E9 8A CE  8A F2 97 95 8A D4 8A E0   ........ ........
13940:  32 C0 95 90 F7 C7 00 80  75 78 4E D1 E5 D1 D2 D1   2....... uxN.....
13950:  D1 D1 D3 D1 D7 F7 C7 00  80 74 EF EB 65 0B D5 0B   ........ .t..e...
13960:  CA 0A CD 8A EB 0B C9 74  44 83 0E 16 00 20 D0 E8   .......t D.... ..
13970:  72 1B D0 E8 72 0F 81 F9  00 80 77 1D 72 27 F6 C7   r...r... ..w.r'..
13980:  01 74 22 EB 14 58 50 D0  E4 72 1A EB 0C D0 E8 72   .t"..XP. .r.....r
13990:  14 58 50 D0 E4 72 02 EB  0C 80 C7 01 83 D7 00 73   .XP..r.. .......s
139A0:  04 BF 00 80 46 33 ED 8B  D5 8B CA 8A D9 EB 4B 90   ....F3.. ......K.
139B0:  F7 C7 00 80 75 0C 4E D1  E5 D1 D2 D1 D1 D1 D3 D1   ....u.N. ........
139C0:  D7 90 A0 0B 00 D0 E8 73  76 D0 E8 0B ED 74 2B 83   .......s v....t+.
139D0:  0E 16 00 20 D0 E8 72 58  D0 E8 72 4C 81 FD 00 80   ... ..rX ..rL....
139E0:  77 07 72 16 F6 C2 01 74  11 33 ED 83 C2 01 13 CD   w.r....t .3......
139F0:  13 DD 13 FD 73 04 BF 00  80 46 A1 96 00 97 89 15   ....s... .F......
13A00:  89 4D 02 89 5D 04 89 45  06 58 5D 80 E4 80 88 65   .M..]..E .X]....e
13A10:  0A 81 FE 00 40 7D 0E 81  FE 01 C0 7E 54 89 75 08   ....@}.. ...¯T.u.
13A20:  C6 45 0B 00 C3 E9 7F 00  58 50 D0 E4 72 CC EB B9   .E...... XP..r...
13A30:  D0 E8 72 C6 58 50 D0 E4  72 AF EB BE E9 1E FF D0   ..r.XP.. r.......
13A40:  E8 73 F9 95 0A C4 0A C2  8A E6 80 E4 07 80 E6 F8   .s...... ........
13A50:  95 0B ED 74 A5 83 0E 16  00 20 D0 E8 72 25 D0 E8   ...t.... . ..r%..
13A60:  72 19 81 FD 00 04 77 27  72 36 F6 C6 08 74 31 EB   r.....w' r6...t1.
```

```
13A70:  1E BE D0 09 E8 67 FA 88  65 0A C3 58 50 D0 E4 72   .....g.. e..XP..r
13A80:  1F EB 0C D0 E8 72 19 58  50 D0 E4 72 02 EB 11 33   .....r.X P..r...3
13A90:  ED 80 C6 08 13 CD 13 DD  13 FD 73 04 BF 00 80 46   ........ ..s....F
13AA0:  33 ED 32 D2 E9 53 FF 83  0E 16 00 08 A0 0B 00 D0   3.2..S.. ........
13AB0:  E8 D0 E8 D0 E8 72 0E D0  E8 72 22 BE DC 09 E8 1D   .....r.. .r".....
13AC0:  FA 88 65 0A C3 D0 E8 72  0A 83 0E 16 00 20 F6 C4   ..e....r ..... ..
13AD0:  80 75 E8 BE F4 09 E8 05  FA 88 65 0A C3 83 0E 16   .u...... ..e.....
13AE0:  00 20 F6 C4 80 74 D4 EB  EA 26 AD 8B F8 26 AD 8A   . ...t.. .&...&..
13AF0:  D0 D1 C0 24 01 D0 C8 86  C4 8B 36 10 00 3B 36 12   ...$.... ..6..;6.
13B00:  00 75 03 E8 D8 EB 83 C6  0C 89 36 10 00 80 CA 80   .u...... ..6.....
13B10:  32 F6 3C FF 74 21 3C 00  74 33 88 64 0A 2C 7F 98   2.<.t!<. t3.d.,..
13B20:  89 44 08 88 74 0B 88 54  07 89 7C 05 33 C0 88 44   .D..t..T ..|.3..D
13B30:  04 89 44 02 89 04 C3 88  64 0A B8 00 40 B6 02 80   ..D..... d...@...
13B40:  FA 80 75 DC 0B FF 75 D8  80 CE 01 EB D3 88 64 0A   ..u...u. ......d.
13B50:  80 FA 80 75 0C 0B FF 75  08 B8 01 C0 80 CE 01 EB   ...u...u ........
13B60:  BF 83 0E 16 00 02 2C 7F  98 40 48 D1 E7 D0 D2 0A   ......,. .@H.....
13B70:  D2 79 F7 EB AB F6 C1 02  75 07 33 C0 8B D8 E9 98   .y...... u.3.....
13B80:  00 F6 C1 01 75 12 8B 5C  05 8A 44 07 8A 64 0A D1   ....u..\ ..D..d..
13B90:  E0 B4 FF D1 D8 E9 81 00  8A 64 0A E9 A6 00 E9 8E   ........ .d......
13BA0:  00 E9 D8 00 8B FE 8B 36  10 00 8B 44 0A 8A 4C 0B   .......6 ...D..L.
13BB0:  0A C9 75 C1 8A 4C 0A 8B  44 08 3D 80 00 7D DF 3D   ..u..L.. D.=..}.=
13BC0:  81 FF 7E DD 04 7F 8A 64  07 86 E0 D0 E0 D0 E1 D1   ..~....d ........
13BD0:  D8 8B 14 0B 54 02 0A D6  32 F6 8B 5C 05 0B 54 03   ....T... 2..\..T.
13BE0:  74 37 83 0E 16 00 20 8A  0E 0B 00 D0 E9 D0 E9 D0   t7.... . ........
13BF0:  E9 72 2C D0 E9 72 32 81  FA 00 80 72 1C 77 05 F6   .r,..r2. ...r.w..
13C00:  C3 01 74 15 8A D0 83 C3  01 15 00 00 32 D0 79 09   ..t..... ....2.y.
13C10:  8B D0 D1 E2 80 FE FF 74  16 93 AB 8B C3 AB C3 D0   .......t ........
13C20:  E9 72 F6 0A E4 78 DD EB  F0 0A E4 78 EC EB D5 83   .r...x.. ...x....
13C30:  0E 16 00 28 8A 0E 0B 00  D0 E9 D0 E9 D0 E9 72 18   ...(.... ......r.
13C40:  D0 E9 72 31 2E 8B 1E 02  0A 80 E4 80 0A FC 2E A1   ..r1.... ........
13C50:  00 0A AB 8B C3 AB EB C6  D0 E9 72 05 F6 C4 80 75   ........ ..r....u
13C60:  E3 2E 8B 1E 06 0A 80 E4  80 0A E7 8A C3 AB 2E A1   ........ ........
13C70:  04 0A AB EB A9 F6 C4 80  74 CA EB E5 83 0E 16 00   ........ t.......
13C80:  30 F7 D8 05 82 FF 3D 18  00 7D 37 91 8B 14 0B 54   0.....=. .}7....T
13C90:  02 8A C2 0A C6 8B 54 04  8B 5C 06 0A C0 74 03 80   ......T. .\...t..
13CA0:  CA 01 D1 EB D1 DA 73 03  80 CA 01 E2 F5 86 E5 8A   ......s. ........
13CB0:  64 0A 80 E4 80 8A C7 8A  FB 8A DE 8A F2 32 D2 E9   d....... .....2..
13CC0:  25 FF 33 C0 8B D8 E9 50  FF 87 FE E8 10 EA 87 FE   %.3....P ........
13CD0:  EB 0A 8B 3E 10 00 3B 3E  12 00 73 ED 83 C7 0C 89   ...>..;> ..s.....
13CE0:  3E 10 00 26 AD 8B E8 26  AD 8B D0 26 AD 8B C8 26   >..&...& ...&...&
13CF0:  AD 8B F7 8B D8 D1 E5 D1  D2 D1 D1 D1 D3 D1 E5 D1   ........ ........
13D00:  D2 D1 D1 D1 D3 D1 E5 D1  D2 D1 D1 D1 D3 80 CB 80   ........ ........
13D10:  88 5C 07 89 4C 05 89 54  03 89 6C 01 0B CD 0B CA   .\..L..T ..l.....
13D20:  8A F4 80 E6 80 88 74 0A  32 F6 88 34 80 E4 7F D1   ......t. 2..4....
13D30:  E8 D1 E8 D1 E8 D1 E8 3D  FF 07 74 0F 3D 00 00 74   .......= ..t.=..t
13D40:  1D 2D FF 03 89 44 08 88  74 0B C3 B8 00 40 B6 02   .-...D.. t....@..
13D50:  80 FB 80 75 EF 0B C9 75  EB 80 CE 01 EB E6 80 FB   ...u...u ........
13D60:  80 75 0B 0B C9 75 07 B8  01 C0 B6 01 EB D6 83 0E   .u...u.. ........
13D70:  16 00 02 2D FF 03 8B 2C  8B 54 02 8B 4C 04 8B 5C   ...-..., .T..L..\
13D80:  06 40 48 D1 E5 D1 D2 D1  D1 D1 D3 0B DB 79 F3 89   .@H..... .....y..
13D90:  2C 89 54 02 89 4C 04 89  5C 06 32 F6 EB A6 F6 C1   ,.T..L.. \.2.....
13DA0:  02 75 09 33 C0 AB AB AB  AB E9 1A 01 F6 C1 01 75   .u.3.... .......u
13DB0:  3D 8B 54 01 8B 5C 03 8B  44 05 8A 4C 07 D0 E9 D1   =.T..\.. D..L....
```

```
13DC0:  D8 D1 DB D1 DA D0 E9 D1  D8 D1 DB D1 DA D0 E9 D1   ........ ........
13DD0:  D8 D1 DB D1 DA 92 AB 8B  C3 AB 8B C2 AB 8A 7C 0A   ........ ......|.
13DE0:  80 E7 80 B8 F0 7F 0A E7  0A C1 AB E9 D8 00 8A 5C   ........ .......\
13DF0:  0A 80 E3 80 E9 EE 00 E9  D0 00 E9 0B 01 EB 9F 90   ........ ........
13E00:  8B FE 8B 36 10 00 8A 4C  0B 0A C9 75 F0 8A 4C 0A   ...6...L ...u..L.
13E10:  8B 6C 08 81 FD 00 04 7D  DE 81 FD 01 FC 7E DB 8A   .l.....} .....~..
13E20:  04 8B 54 01 0A C0 74 03  80 CA 01 F6 C2 07 74 52   ..T...t. ......tR
13E30:  83 0E 16 00 20 A0 0B 00  D0 E8 D0 E8 D0 E8 72 3A   .... ... ......r:
13E40:  D0 E8 72 30 F6 C2 04 74  39 F6 C2 0B 74 34 8B 5C   ..r0...t 9...t4.\
13E50:  03 8B 44 05 8A 4C 07 80  E1 7F 83 C2 08 83 D3 00   ..D..L.. ........
13E60:  15 00 00 80 D1 00 79 26  80 E1 7F 45 81 FD 00 04   ......y& ...E....
13E70:  7C 1C EB 53 D0 E1 73 D6  EB 08 D0 E8 72 04 D0 E1   |..S..s. ....r...
13E80:  72 CC 8B 5C 03 8B 44 05  8A 4C 07 80 E1 7F D0 E9   r..\..D. .L......
13E90:  D1 D8 D1 DB D1 DA D0 E9  D1 D8 D1 DB D1 DA D0 E9   ........ ........
13EA0:  D1 D8 D1 DB D1 DA 92 AB  8B C3 AB 8B C2 AB 8B C5   ........ ........
13EB0:  05 FF 03 D1 E0 D1 E0 D1  E0 D1 E0 0A C1 8A 4C 0A   ........ ......L.
13EC0:  80 E1 80 0A E1 AB C3 83  EF 06 83 0E 16 00 28 8A   ........ ......(.
13ED0:  5C 0A 80 E3 80 8A 0E 0B  00 D0 E9 D0 E9 D0 E9 72   \....... .......r
13EE0:  14 D0 E9 72 1D BE 08 0A  2E A5 2E A5 2E A5 2E AD   ...r.... ........
13EF0:  0A E3 AB EB D1 D0 E9 72  04 0A DB 75 E8 BE 10 0A   .......r ...u....
13F00:  EB E6 0A DB 74 DF EB F5  83 0E 16 00 30 81 C5 FF   ....t... ....0...
13F10:  03 F7 DD 8B CD 83 C1 04  8A 74 0A 80 E6 80 8A 54   ........ .t.....T
13F20:  07 8B 5C 05 8B 6C 03 8B  44 01 D0 EA D1 DB D1 DD   ..\..l.. D.......
13F30:  D1 D8 E2 F6 AB 8B C5 AB  8B C3 AB 8B C2 AB EB 86   ........ ........
13F40:  26 AD 8B F8 0B FF 74 31  33 ED 8B DD 8B D3 B8 0F   &.....t1 3.......
13F50:  00 8B 36 10 00 3B 36 12  00 75 03 E8 80 E7 83 C6   ..6..;6. .u......
13F60:  0C 89 36 10 00 32 C9 88  4C 0B 8B CF 80 E5 80 79   ..6..2.. L......y
13F70:  02 F7 DF 88 6C 0A E9 59  02 8B 36 10 00 3B 36 12   ....l..Y ..6..;6.
13F80:  00 75 03 E8 58 E7 83 C6  0C 89 36 10 00 33 C0 89   .u..X... ..6..3..
13F90:  04 89 44 02 89 44 04 89  44 06 C7 44 08 01 C0 88   ..D..D.. D..D....
13FA0:  64 0A B4 01 88 64 0B C3  56 8B 36 10 00 F6 44 0B   d....d.. V.6...D.
13FB0:  02 75 38 F6 44 0B 01 75  2E 8B 4C 08 83 F9 0F 7F   .u8.D..u ..L.....
13FC0:  2A 8B 6C 04 8B 7C 06 8B  14 8B 5C 02 E8 2A 02 0B   *.l..|.. ..\..*..
13FD0:  DB 75 18 8A 64 0A 0A E4  79 04 F7 DA 74 04 33 C2   .u..d... y...t.3.
13FE0:  78 09 5F 8B C2 AB C3 33  D2 EB F7 83 0E 16 00 01   x._....3 ........
13FF0:  BA 00 80 EB ED 26 AD 8B  E8 26 AD 8B F8 0B C5 74   .....&.. .&.....t
14000:  3D 33 DB 8B D3 B8 1F 00  8B 36 10 00 3B 36 12 00   =3...... .6..;6..
14010:  75 03 E8 C9 E6 83 C6 0C  89 36 10 00 32 C9 88 4C   u....... .6..2..L
14020:  0B 8B CF 80 E5 80 79 0C  83 F7 FF 83 F5 FF 83 C5   ......y. ........
14030:  01 83 D7 00 88 6C 0A 0B  FF 74 06 E9 94 01 E9 38   .....l.. .t.....8
14040:  FF 8B FD 33 ED 2D 10 00  E9 87 01 56 E8 08 00 5F   ...3.-.. ...V..._
14050:  8B C2 AB 8B C3 AB C3 8B  36 10 00 F6 44 0B 02 75   ........ 6...D..u
14060:  41 F6 44 0B 01 75 32 8B  4C 08 83 F9 1F 7F 33 8B   A.D..u2. L.....3.
14070:  6C 04 8B 7C 06 8B 14 8B  5C 02 E8 7C 01 0B ED 75   l..|.... \..|...u
14080:  21 8A 64 0A 0A E4 79 0C  83 F3 FF 83 F2 FF 83 C2   !.d...y. ........
14090:  01 83 D3 00 33 C3 78 06  C3 33 D2 8B DA C3 0B DA   ....3.x. .3......
140A0:  74 F6 83 0E 16 00 01 BB  00 80 33 D2 C3 26 AD 8B   t....... ..3..&..
140B0:  D0 26 AD 8B D8 26 AD 8B  E8 26 AD 8B F8 0B C5 0B   .&...&.. .&......
140C0:  C3 0B C2 74 3F B8 3F 00  8B 36 10 00 3B 36 12 00   ...t?.?. .6..;6..
140D0:  75 03 E8 09 E6 83 C6 0C  89 36 10 00 32 C9 88 4C   u....... .6..2..L
140E0:  0B 8B CF 80 E5 80 79 03  E8 91 00 88 6C 0A 0B FF   ......y. ....l...
140F0:  75 0F 0B ED 75 0B 8B FB  8B EA 33 DB 33 D2 2D 20   u...u... ..3.3.-
14100:  00 E9 CE 00 E9 72 FE 56  E8 0E 00 97 92 5F AB 8B   .....r.V ....._..
```

```
14110:  C3 AB 8B C5 AB 8B C2 AB  C3 8B 36 10 00 F6 44 0B   ........ ..6...D.
14120:  02 75 4F F6 44 0B 01 75  35 8B 4C 08 83 F9 3F 7F   .uO.D..u 5.L...?.
14130:  41 8B 6C 04 8B 7C 06 8B  14 8B 5C 02 E8 BA 00 8A   A.l..|.. ..\.....
14140:  64 0A 0A E4 79 03 E8 33  00 33 C7 78 1B 3B 36 0E   d...y..3 .3.x.;6.
14150:  00 75 03 E8 98 E5 83 EE  0C 89 36 10 00 C3 33 FF   .u...... ..6...3.
14160:  33 ED 8B DD 8B D5 EB E5  0B FD 0B FB 0B FA 75 02   3....... ......u.
14170:  EB DB 83 0E 16 00 01 BF  00 80 EB E4 F7 D7 F7 D5   ........ ........
14180:  F7 D3 F7 DA F5 83 D3 00  83 D5 00 83 D7 00 C3 8B   ........ ........
14190:  36 10 00 8B 4C 08 83 F9  3F 7D 20 8B 6C 04 8B 7C   6...L... ?} .l..|
141A0:  06 8B 14 8B 5C 02 E8 50  00 33 C0 0B C7 0B C5 0B   ....\..P .3......
141B0:  C3 0B C2 74 07 B8 3F 00  E8 17 00 C3 C7 44 08 01   ...t..?. .....D..
141C0:  C0 89 04 89 44 02 89 44  04 89 44 06 C6 44 0B 01   ....D..D ..D..D..
141D0:  EB E9 33 C9 D1 E2 D1 D3  D1 D5 D1 D7 72 02 E2 F4   ..3..... ....r...
141E0:  D1 DF D1 DD D1 DB D1 DA  03 C1 89 44 08 89 14 89   ........ ...D....
141F0:  5C 02 89 6C 04 89 7C 06  C3 33 C0 83 E9 3F F7 D9   \..l..|. .3...?..
14200:  49 7C 61 74 2B 83 F9 40  7D 5B 83 F9 30 7E 13 0B   I|at+..@ }[..0~..
14210:  D3 0B D5 74 02 0C 01 8B  D7 33 FF 8B EF 8B DF 83   ...t.... .3......
14220:  E9 30 D1 EF D1 DD D1 DB  D1 DA 73 02 D0 D0 E2 F2   .0...... ..s.....
14230:  D1 EF D1 DD D1 DB D1 DA  D0 D4 0B C0 74 26 83 0E   ........ ....t&..
14240:  16 00 20 F6 06 0B 00 04  75 29 F6 06 0B 00 08 75   .. ..... u).....u
14250:  31 0A C2 22 E0 D0 EC 73  0B 33 C0 83 C2 01 13 D8   1.."...s .3......
14260:  13 E8 13 F8 C3 B0 01 32  E4 33 FF 8B EF 8B DF 8B   .......2 .3......
14270:  D7 EB C7 F6 06 0B 00 08  75 EA F6 44 0A 80 75 D9   ........ u..D..u.
14280:  EB E2 F6 44 0A 80 75 DC  EB CF 8B FE 8B 36 10 00   ...D..u. .....6..
14290:  3B 36 12 00 75 03 E8 45  E4 83 C6 0C 89 36 10 00   ;6..u..E .....6..
142A0:  87 FE 8C C0 8C DA 8E C2  8E D8 A5 A5 A5 A5 8C C0   ........ ........
142B0:  8C DA 8E C2 8E D8 26 AD  83 EF 08 87 F7 8A F4 80   ......&. ........
142C0:  E6 80 88 74 0A 80 E4 7F  32 F6 3D FF 7F 74 0F 3D   ...t.... 2.=..t.=
142D0:  00 00 74 25 2D FF 3F 89  44 08 88 74 0B C3 B8 00   ..t%-.?. D..t....
142E0:  40 B6 02 81 7C 06 00 80  75 ED 8B 6C 04 0B 6C 02   @...|... u..l..l.
142F0:  0B 2C 75 E3 80 CE 01 EB  DE 8B 6C 06 0B 6C 04 0B   .,u..... ..l..l..
14300:  6C 02 0B 2C 75 07 B8 01  C0 B6 01 EB CA 83 0E 16   l..,u... ........
14310:  00 30 33 ED 89 2C 89 6C  02 89 6C 04 89 6C 06 EB   .03..,.l ..l..l..
14320:  E5 F6 C7 01 75 1F A5 A5  A5 A5 B8 FF 7F 0A E6 AB   ....u... ........
14330:  8B 36 10 00 3B 36 0E 00  75 03 E8 B1 E3 83 EE 0C   .6..;6.. u.......
14340:  89 36 10 00 C3 33 C0 AB  AB AB B8 00 80 AB B8 FF   .6...3.. ........
14350:  7F 0A E6 AB 8B 36 10 00  3B 36 0E 00 75 03 E8 8D   .....6.. ;6..u...
14360:  E3 83 EE 0C 89 36 10 00  C3 F6 C7 02 75 B3 33 C0   .....6.. ....u.3.
14370:  AB AB AB AB AB 8B 36 10  00 3B 36 0E 00 75 03 E8   ......6. .;6..u..
14380:  6C E3 83 EE 0C 89 36 10  00 C3 8B FE 8B 36 10 00   l.....6. .....6..
14390:  8B 44 08 05 FF 3F 8A 74  0A 80 E6 80 0A E6 8A 7C   .D...?.t .......|
143A0:  0B 0A FF 75 C4 A5 A5 A5  A5 AB 83 EE 08 3B 36 0E   ...u.... .....;6.
143B0:  00 75 03 E8 38 E3 83 EE  0C 89 36 10 00 C3 8B 36   .u..8... ..6....6
143C0:  10 00 80 64 0A 7F C3 8B  36 10 00 80 74 0A 80 C3   ...d.... 6...t...
143D0:  26 AD A3 0A 00 A3 06 00  C3 A1 06 00 8B FE AB C3   &....... ........
143E0:  A1 0C 00 8B FE AB C3 8B  36 10 00 8B FE 83 EF 0C   ........ 6.......
143F0:  B1 0F 8A 45 08 24 0F 2A  C8 8B 45 06 D3 E8 8A 4D   ...E.$.* ..E....M
14400:  0A 0A C9 79 02 F7 D8 03  44 08 70 0E 3D 00 40 7D   ...y.... D.p.=.@}
14410:  0B 3D 01 C0 7E 0F 89 44  08 C3 79 09 B8 00 40 C6   .=..~..D ..y...@.
14420:  44 0B 03 EB F1 B8 01 C0  C6 44 0B 01 EB E8 BA 01   D....... .D......
14430:  00 EB 02 33 D2 F7 06 16  00 00 20 74 02 87 F7 8A   ...3.... .. t....
14440:  44 0A 8A 65 0A 33 DB 8A  5C 0B D0 E3 D0 E3 0A 5D   D..e.3.. \......]
14450:  0B D0 E3 2E FF A7 40 09  32 E0 78 46 0A C0 79 04   ......@. 2.xF..y.
```

```
14460:  87 F7 86 DF 8B 44 08 3B  45 08 7C 1A 7F 1F B9 04   .....D.; E.|.....
14470:  00 83 C6 06 83 C7 06 FD  F3 A7 FC 72 09 77 0E C6   ........ ...r.w..
14480:  06 0D 00 40 EB 40 C6 06  0D 00 01 EB 39 C6 06 0D   ...@.@.. ....9...
14490:  00 00 EB 32 C6 06 0D 00  41 EB 2B F6 06 0B 00 10   ...2.... A.+.....
144A0:  74 F2 24 80 78 E0 EB E5  F6 06 0B 00 10 74 E5 80   t.$.x... .....t..
144B0:  E4 80 78 D9 EB D0 F6 06  0B 00 10 74 D7 32 E0 80   ..x..... ...t.2..
144C0:  E4 80 74 BB EB DC 0B D2  74 14 8B 36 10 00 3B 36   ..t..... t..6..;6
144D0:  0E 00 75 03 E8 17 E2 83  EE 0C 89 36 10 00 C3 8B   ..u..... ...6....
144E0:  36 10 00 B0 41 3B 36 0E  00 74 0E 8B 44 0A 86 C4   6...A;6. .t..D...
144F0:  D1 C0 24 07 BB C8 09 2E  D7 A2 0D 00 C3 8B 36 10   ..$..... ......6.
14500:  00 8A 44 0A 24 80 33 DB  8B D3 8A 5C 0B D1 E3 2E   ..D.$.3. ...\....
14510:  FF A7 60 09 BB 6C 0A EB  1C BB 78 0A EB 17 BB 84   ..`..l.. ..x.....
14520:  0A EB 12 BB 90 0A EB 0D  BB 9C 0A EB 08 BB 18 0A   ........ ........
14530:  EB 03 BB 24 0A 8B 36 10  00 3B 36 12 00 75 03 E8   ...$..6. .;6..u..
14540:  9C E1 83 C6 0C 89 36 10  00 8B F3 8B 3E 10 00 2E   ......6. ....>...
14550:  A5 2E A5 2E A5 2E A5 2E  A5 2E A5 C3 E8 16 ED 73   ........ .......s
14560:  04 5A E9 06 ED 8B F7 83  C6 0C 3B 36 10 00 7F 08   .Z...... ..;6....
14570:  E8 86 EF 83 C7 0C EB EF  83 EF 0C 89 3E 10 00 C3   ........ ....>...
14580:  F7 C1 00 1C 74 1B 8C D8  8E C0 E8 E8 EC 73 04 5A   ....t... .....s.Z
14590:  E9 D8 EC B9 06 00 8B 04  8B 1D AB 89 1C 46 46 E2   ........ .....FF.
145A0:  F5 C3 E8 D0 EC 73 04 5A  E9 C0 EC 8B 36 10 00 3B   .....s.Z ....6..;
145B0:  36 12 00 75 03 E8 26 E1  83 C6 0C 89 36 10 00 8C   6..u..&. ....6...
145C0:  D8 8E C0 87 F7 E8 31 EF  C3 F7 C1 C0 01 74 10 E8   ......1. .....t..
145D0:  A3 EC 73 04 5A E9 93 EC  8C DA 8E C2 E8 1A EF 0B   ..s.Z... ........
145E0:  C0 74 14 8B 36 10 00 3B  36 0E 00 75 03 E8 FE E0   .t..6..; 6..u....
145F0:  83 EE 0C 89 36 10 00 C3  55 8B 3E 10 00 89 3E 96   ....6... U.>...>.
14600:  00 33 ED C7 06 A2 00 00  00 8B F7 83 EE 0C 8B 45   .3...... .......E
14610:  08 2B 44 08 A3 A0 00 8B  15 8B 4D 02 8B 5D 04 8B   .+D..... ..M..]..
14620:  45 06 7D 06 8B 75 08 EB  42 90 3B 44 06 72 25 77   E.}..u.. B.;D.r%w
14630:  12 3B 5C 04 72 1E 77 0B  3B 4C 02 72 17 77 04 3B   .;\.r.w. ;L.r.w.;
14640:  14 72 11 E8 BB 00 83 3E  A0 00 00 74 1B E8 87 00   .r.....> ...t....
14650:  75 D8 EB 14 83 3E A0 00  00 74 0D E8 8B 00 E8 A0   u....>.. .t......
14660:  00 E8 73 00 75 C4 EB 00  8B 74 08 8B 7D 0A 97 8A   ..s.u... .t..}...
14670:  E0 50 8B C5 83 E5 FC 0B  2E A2 00 8A 26 0D 00 80   .P...... ....&...
14680:  E4 FB A8 01 75 05 80 E4  FD EB 03 80 CC 02 A8 02   ....u... ........
14690:  75 09 0B ED 74 21 80 E4  BF EB 03 80 CC 40 A8 04   u...t!.. .....@..
146A0:  75 09 0B ED 74 20 80 E4  FE EB 03 80 CC 01 88 26   u...t .. .......&
146B0:  0D 00 33 ED E9 45 F2 A0  0D 00 A8 02 75 05 80 E4   ..3..E.. ....u...
146C0:  BF EB 03 80 CC 40 A0 0D  00 A8 40 75 05 80 E4 FE   .....@.. ..@u....
146D0:  EB DC 80 CC 01 EB D7 F6  C4 80 75 0C 83 3E A0 00   ........ ..u..>..
146E0:  00 74 05 E8 03 00 EB EF  C3 D1 E2 D1 D1 D1 D3 D1   .t...... ........
146F0:  D0 FF 0E A0 00 D1 E5 72  01 C3 C7 06 A2 00 01 00   .......r ........
14700:  C3 2B 14 1B 4C 02 1B 5C  04 1B 44 06 45 C3 8B 36   .+..L..\ ..D.E..6
14710:  10 00 E8 2C 00 C3 D0 DC  73 20 D0 D0 72 12 A0 0B   ...,.... s ..r...
14720:  00 A8 10 75 1B EB 09 F6  C4 02 75 EA D0 DC 72 10   ...u.... ..u...r.
14730:  8B FE BE E8 09 E8 A6 ED  8B F7 81 0E 16 00 81 00   ........ ........
14740:  C3 8B 44 0A A9 80 03 75  DE 56 BF 4A 00 C7 45 0A   ..D....u .V.J..E.
14750:  00 00 8B 44 08 48 8B 5C  06 8B 4C 04 8B 54 02 A8   ...D.H.\ ..L..T..
14760:  01 74 07 40 D1 EB D1 D9  D1 DA D1 F8 89 45 08 83   .t.@.... .....E..
14770:  FB FE 72 03 F9 EB 39 52  B8 75 B0 F7 E3 BD D8 57   ..r...9R .u.....W
14780:  03 EA 73 03 BD FF FF 8B  D3 33 C0 F7 F5 03 E8 D1   ..s..... .3......
14790:  DD 8B D3 8B C1 F7 F5 F9  13 E8 D1 DD 8B D3 8B C1   ........ ........
147A0:  F7 F5 8B F0 58 F7 F5 8B  DD 8B C8 83 C1 01 13 DE   ....X... ........
```

```
147B0:  D1 DB D1 D9 89 5D 06 89  4D 04 C7 45 02 00 00 C7   .....].. M..E....
147C0:  05 00 00 8B F7 5F 89 3E  96 00 E8 97 EC BE 4A 00   ....._.> ......J.
147D0:  E8 A3 EC FF 4D 08 8B F7  C3 57 BF 8A 00 2E A5 2E   ....M... .W......
147E0:  A5 2E A5 2E A5 2E A5 2E  A5 BE 8A 00 5F C3 3A ED   ........ ...._.:.
147F0:  EB 56 8C C9 8E D9 8B 4C  0A 80 E1 80 26 8B 55 0A   .V.....L ....&.U.
14800:  80 E2 80 3A D1 75 45 06  56 57 0A C9 79 08 1E 06   ...:.uE. VW..y...
14810:  1F 07 87 F7 87 CA 80 E5  01 80 E6 01 3A F5 75 28   ........ ....:.u(
14820:  0A ED 77 CA 8B 4C 08 81  C1 FF 3F 26 8B 55 08 81   ..w..L.. ..?&.U..
14830:  C2 FF 3F 3B CA 75 11 83  C6 06 83 C7 06 FD A7 75   ..?;.u.. .......u
14840:  07 A7 75 04 A7 75 01 A7  FC 5F 5E 07 8C C1 8E D9   ..u..u.. ._^.....
14850:  C3 BF 7E 00 E8 A2 EC 57  56 53 BF 72 00 E8 99 EC   ..~....W VS.r....
14860:  89 3E 96 00 E8 F5 EB 5E  2E AD 91 5F E8 6F EC 89   .>.....^ ..._.o..
14870:  3E 96 00 51 56 BE 72 00  E8 E1 EB 5E 83 C6 0C 56   >..QV.r. ...^...V
14880:  E8 56 FF E8 F0 EB 5E 59  E2 E9 8B DE 5E 56 53 E8   .V....^Y ....^VS.
14890:  CA EB 5E 83 C6 0C 2E AD  91 5B 57 8B FB E8 3E EC   ..^..... .[W...>.
148A0:  51 56 BE 72 00 89 3E 96  00 E8 CA EB 5E 59 51 83   QV.r..>. ....^YQ.
148B0:  C6 0C 56 BE 72 00 E8 A3  EB 5E 56 E8 1B FF E8 B5   ..V.r... .^V.....
148C0:  EB 5E 59 E2 E9 8B F7 5F  C3 8B 36 10 00 E8 1E 00   .^Y...._ ..6.....
148D0:  56 8B 36 10 00 3B 36 12  00 75 03 E8 00 DE 83 C6   V.6..;6. .u......
148E0:  0C 89 36 10 00 8B 3E 10  00 5E E8 0C EC C3 BB A8   ..6...>. .^......
148F0:  0A E8 5D FF C3 8B 3E 10  00 8B F7 8B 44 0A 83 EF   ..]...>. ....D...
14900:  0C E8 19 00 8B 36 10 00  8B 36 10 00 3B 36 0E 00   .....6.. .6..;6..
14910:  75 03 E8 D9 DD 83 EE 0C  89 36 10 00 C3 89 3E 96   u....... .6....>.
14920:  00 E8 40 EB B0 00 BE 30  0A E8 C6 FE 73 36 8B F7   ..@....0 ....s6..
14930:  BF 4A 00 E8 C3 EB 56 BE  3C 0A E8 9C FE 89 3E 96   .J....V. <.....>.
14940:  00 E8 18 EB BE 24 0A E8  8F FE E8 09 EB 5E 57 8B   .....$.. .....^W.
14950:  FE BE 3C 0A E8 82 FE 89  3E 96 00 E8 18 EB 5E E8   ..<..... >.....^.
14960:  0C EB B0 01 50 8B F7 BB  0C 0B E8 E4 FE 89 3E 96   ....P... ......>.
14970:  00 E8 F0 EA 58 0A C0 74  09 BE 48 0A E8 5A FE E8   ....X..t ..H..Z..
14980:  F4 EA C3 8B 36 10 00 E8  01 00 C3 BB 7C 0B E8 C0   ....6... ....|...
14990:  FE 57 87 F7 89 3E 96 00  E8 BB EA 8B F7 5F 89 3E   .W...>.. ....._.>
149A0:  96 00 E8 BF EA FF 45 08  8B F7 C3 8B 3E 10 00 8B   ......E. ....>...
149B0:  F7 8B 44 0A 83 EF 0C E8  19 00 8B 36 10 00 8B 36   ..D..... ...6...6
149C0:  10 00 3B 36 0E 00 75 03  E8 23 DD 83 EE 0C 89 36   ..;6..u. .#.....6
149D0:  10 00 C3 56 8B F7 BF 5A  00 E8 1D EB 8B FE 5E 57   ...V...Z ......^W
149E0:  BF 66 00 E8 13 EB 8B 5D  08 C7 45 08 00 00 BE 54   .f.....] ..E....T
149F0:  0A E8 FE FD 77 04 FF 4D  08 43 53 BE 24 0A E8 D8   ....w..M .CS.$...
14A00:  FD 89 3E 96 00 E8 4E EA  8B F7 5B 5F 53 E8 69 00   ..>...N. ..[_S.i.
14A10:  5B 33 C0 0B DB 74 39 8B  D0 79 04 B2 80 F7 DB B9   [3...t9. .y......
14A20:  10 00 49 D1 E3 73 FB 57  D1 DB BF 66 00 AB AB AB   ..I..s.W ...f....
14A30:  8B C3 AB 8B C1 AB 8B C2  AB BF 5A 00 BE 66 00 89   ........ ..Z..f..
14A40:  3E 96 00 E8 16 EA 8B F7  5F 89 3E 96 00 E8 26 EA   >....... _.>...&.
14A50:  C3 8B 3E 10 00 8B F7 8B  44 0A 83 EF 0C E8 19 00   ..>..... D.......
14A60:  8B 36 10 00 8B 36 10 00  3B 36 0E 00 75 03 E8 7D   .6...6.. ;6..u..}
14A70:  DC 83 EE 0C 89 36 10 00  C3 57 BF 4A 00 E8 79 EA   .....6.. .W.J..y.
14A80:  56 BE 60 0A E8 52 FD 89  3E 96 00 E8 E8 E9 5E E8   V.`..R.. >.....^.
14A90:  DC E9 FF 45 08 8B F7 BB  C8 0B E8 B4 FD 89 3E 96   ...E.... ......>.
14AA0:  00 E8 C0 E9 8B F7 5F 89  3E 96 00 E8 AE E9 C3 00   ......_. >.......
14AB0:  00 00 00 00 00 00 00 00  00 00 1E 0E 1F B8 02 35   ........ .......5
14AC0:  CD 21 89 1E 72 26 8C 06  74 26 BA D2 26 B8 02 25   .!..r&.. t&..&..%
14AD0:  CD 21 B8 23 35 CD 21 89  1E 76 26 8C 06 78 26 BA   .!.#5.!. .v&..x&.
14AE0:  BA 26 B8 23 25 CD 21 1F  C3 1E 50 52 B8 02 25 2E   .&.#%.!. ..PR..%.
14AF0:  C5 16 72 26 CD 21 5A 58  1F C3 50 52 1E E8 E9 FF   ..r&.!ZX ..PR....
```

```
14B00:  2E C5 16 76 26 B8 23 25  CD 21 1F 5A 58 2E FF 2E   ...v&.#% .!.ZX...
14B10:  76 26 90 2E DD 3E 70 26  51 B9 03 00 E2 FE 59 2E   v&...>p& Q.....Y.
14B20:  F6 06 70 26 80 74 04 E8  F4 DB CF 2E FF 2E 72 26   ..p&.t.. ......r&
14B30:  00 00 00 00 00 00 00 00  00 00 00 00 00 00 A9 00   ........ ........
14B40:  00 00 51 01 00 90 00 B1  01 01 00 B2 00 F0 FF B0   ..Q..... ........
14B50:  00 43 CC B0 4D 53 20 52  75 6E 2D 54 69 6D 65 20   .C..MS R un-Time 
14B60:  4C 69 62 72 61 72 79 20  2D 20 43 6F 70 79 72 69   Library  - Copyri
14B70:  67 68 74 20 28 63 29 20  31 39 39 30 2C 20 4D 69   ght (c)  1990, Mi
14B80:  63 72 6F 73 6F 66 74 20  43 6F 72 70 18 00 45 6E   crosoft  Corp..En
14B90:  74 65 72 20 66 69 6E 67  65 72 20 6E 61 6D 65 3A   ter fing er name:
14BA0:  20 28 6F 72 20 22 65 78  69 74 22 29 20 3E 00 25    (or "ex it") >.%
14BB0:  73 00 45 58 49 54 00 63  61 6E 6E 6F 74 20 65 6E   s.EXIT.c annot en
14BC0:  72 6F 6C 6C 20 66 69 6E  67 65 72 20 25 73 0A 00   roll fin ger %s..
14BD0:  63 61 6E 6E 6F 74 20 65  6E 72 6F 6C 6C 20 66 69   cannot e nroll fi
14BE0:  6E 67 65 72 00 45 6E 74  65 72 20 66 69 6E 67 65   nger.Ent er finge
14BF0:  72 20 6E 61 6D 65 3A 20  28 6F 72 20 22 65 78 69   r name:  (or "exi
14C00:  74 22 29 20 3E 20 00 25  73 00 00 00 53 5F 45 4E   t") > .% s...S_EN
14C10:  52 00 00 00 00 25 73 25  31 64 00 00 00 00 04 00   R....%s% 1d......
14C20:  0A 00 77 74 00 73 68 69  66 74 2E 64 61 74 00 25   ..wt.shi ft.dat.%
14C30:  32 68 64 00 0A E1 00 B2  00 0D 00 B0 60 01 80 01   2hd..... ....`...
14C40:  00 00 00 00 11 00 22 00  34 00 45 00 57 00 69 00   ......". 4.E.W.i.
14C50:  7A 00 8C 00 9E 00 B0 00  C2 00 D4 00 E6 00 F9 00   z....... ........
14C60:  0B 01 1E 01 31 01 44 01  58 01 6B 01 7F 01 94 01   ....1.D. X.k.....
14C70:  A8 01 BD 01 D2 01 E7 01  FD 01 13 02 2A 02 41 02   ........ ....*.A.
14C80:  58 02 70 02 89 02 A2 02  BC 02 D6 02 F1 02 0D 03   X.p..... ........
14C90:  29 03 47 03 65 03 84 03  A4 03 C5 03 E8 03 0B 04   ).G.e... ........
14CA0:  30 04 56 04 7E 04 A7 04  D2 04 FF 04 2F 05 60 05   0.V.~... ..../.`.
14CB0:  94 05 CA 05 03 06 40 06  80 06 C4 06 0C 07 58 07   ......@. ......X.
14CC0:  AA 07 02 08 60 08 C6 08  33 09 AB 09 2D 0A BB 0A   ....`... 3...-...
14CD0:  58 0B 05 0C C6 0C 9F 0D  94 0E AA 0F EB 10 60 12   X....... ......`.
14CE0:  18 14 27 16 A9 18 CB 1B  D0 1F 2A 25 A6 2C DC 37   ..'..... ..*%.,.7
14CF0:  89 4A DC 6F C9 DF 00 00  01 00 01 00 02 00 02 00   .J.o.... ........
14D00:  03 00 03 00 04 00 04 00  05 00 06 00 06 00 07 00   ........ ........
14D10:  07 00 08 00 08 00 09 00  09 00 0A 00 0B 00 0B 00   ........ ........
14D20:  0C 00 0C 00 0D 00 0D 00  0E 00 0E 00 0F 00 0F 00   ........ ........
14D30:  10 00 11 00 11 00 12 00  12 00 13 00 13 00 14 00   ........ ........
14D40:  14 00 15 00 15 00 16 00  16 00 17 00 17 00 18 00   ........ ........
14D50:  18 00 18 00 19 00 19 00  1A 00 1A 00 1A 00 1B 00   ........ ........
14D60:  1C 00 1C 00 1D 00 1D 00  1D 00 1E 00 1E 00 1F 00   ........ ........
14D70:  1F 00 20 00 20 00 20 00  21 00 21 00 22 00 22 00   .. . . . !.!.".".
14D80:  22 00 23 00 23 00 23 00  24 00 24 00 25 00 25 00   ".#.#.#. $.$.%.%.
14D90:  25 00 26 00 26 00 26 00  27 00 27 00 27 00 28 00   %.&.&.&. '.'.'.(.
14DA0:  28 00 28 00 29 00 29 00  29 00 2A 00 2A 00 2A 00   (.(.).). ).*.*.*.
14DB0:  2B 00 2B 00 2B 00 2C 00  2C 00 2C 00 2C 00 2D 00   +.+.+.,. ,.,.,.-.
14DC0:  10 27 0E 27 09 27 02 27  F7 26 E9 26 D9 26 C5 26   .'.'.'.' .&.&.&.&
14DD0:  AE 26 94 26 78 26 58 26  35 26 0F 26 E6 25 BB 25   .&.&x&X& 5&.&.%.%
14DE0:  8C 25 5B 25 26 25 EF 24  B4 24 77 24 37 24 F5 23   .%[%&%.$ .$w$7$.#
14DF0:  AF 23 67 23 1B 23 CE 22  7D 22 2A 22 D4 21 7B 21   .#g#.#." }"*".!{!
14E00:  20 21 C2 20 62 20 FF 1F  9A 1F 32 1F C8 1E 5B 1E    !. b .. ..2...[.
14E10:  EC 1D 7B 1D 07 1D 91 1C  19 1C 9F 1B 22 1B A3 1A   ..{..... ....."..
14E20:  23 1A A0 19 1B 19 95 18  0C 18 82 17 F5 16 67 16   #....... ......g.
14E30:  D7 15 46 15 B3 14 1E 14  88 13 F0 12 56 12 BB 11   ..F..... ....V...
14E40:  1F 11 82 10 E3 0F 43 0F  A2 0E FF 0D 5C 0D B7 0C   ......C. ....\...
```

```
14E50:  12 0C 6B 0B C4 0A 1C 0A  73 09 C9 08 1F 08 74 07   ..k..... s.....t.
14E60:  C8 06 1C 06 6F 05 C2 04  15 04 67 03 B9 02 0B 02   ....o... ..g.....
14E70:  5C 01 AE 00 00 00 00 00  AE 00 5C 01 0B 02 B9 02   \....... ..\.....
14E80:  67 03 15 04 C2 04 6F 05  1C 06 C8 06 74 07 1F 08   g.....o. ....t...
14E90:  C9 08 73 09 1C 0A C4 0A  6B 0B 12 0C B7 0C 5C 0D   ..s..... k.....\.
14EA0:  FF 0D A2 0E 43 0F E3 0F  82 10 1F 11 BB 11 56 12   ....C... ......V.
14EB0:  F0 12 88 13 1E 14 B3 14  46 15 D7 15 67 16 F5 16   ........ F...g...
14EC0:  82 17 0C 18 95 18 1B 19  A0 19 23 1A A3 1A 22 1B   ........ ..#...".
14ED0:  9F 1B 19 1C 91 1C 07 1D  7B 1D EC 1D 5B 1E C8 1E   ........ {...[...
14EE0:  32 1F 9A 1F FF 1F 62 20  C2 20 20 21 7B 21 D4 21   2.....b  .  !{!.!
14EF0:  2A 22 7D 22 CE 22 1B 23  67 23 AF 23 F5 23 37 24   *"}".".# g#.#.#7$
14F00:  77 24 B4 24 EF 24 26 25  5B 25 8C 25 BB 25 E6 25   w$.$.$&% [%.%.%.%
14F10:  0F 26 35 26 58 26 78 26  94 26 AE 26 C5 26 D9 26   .&5&X&x& .&.&.&.&
14F20:  E9 26 F7 26 02 27 09 27  0E 27 10 27 A4 06 72 74   .&.&.'.' .'.'..rt
14F30:  00 65 72 72 5F 74 68 2E  63 66 67 00 25 68 64 20   .err_th. cfg.%hd
14F40:  00 00 49 6E 73 75 66 66  69 63 69 65 6E 74 20 6D   ..Insuff icient m
14F50:  65 6D 6F 72 79 0A 00 00  A0 01 40 00 80 01 00 00   emory... ..@.....
14F60:  49 4D 47 44 5C 00 46 50  32 30 30 30 2E 43 46 47   IMGD\.FP 2000.CFG
14F70:  00 00 FF FF FF FF 01 00  01 00 FF FF 01 00 00 00   ........ ........
14F80:  00 00 FF FF 00 00 4A 03  B2 FF 0C 00 B0 00 00 01   ......J. ........
14F90:  00 FF FF 01 00 FF FF FF  FF 01 0D 00 B2 00 53 00   ........ ......S.
14FA0:  B0 70 6F 73 69 74 69 6F  6E 20 58 20 6F 75 74 20   .positio n X out
14FB0:  6F 66 20 72 61 6E 67 65  20 25 68 64 0A 00 70 6F   of range  %hd..po
14FC0:  73 69 74 69 6F 6E 20 59  20 6F 75 74 20 6F 66 20   sition Y  out of
14FD0:  72 61 6E 67 65 20 25 68  64 0A 00 72 62 00 66 69   range %h d..rb.fi
14FE0:  6C 65 20 25 73 20 6E 6F  74 20 66 6F 75 6E 64 0A   le %s no t found.
14FF0:  00 72 00 63 66 67 20 66  69 6C 65 20 64 6F 65 73   .r.cfg f ile does
15000:  6E 27 74 20 65 78 69 73  74 2E 00 0A 25 73 20 25   n't exis t...%s %
15010:  73 0A 00 2F 25 63 20 25  5B 5E 0A 5D 0A 00 25 73   s../%c % [^.]..%s
15020:  00 25 68 64 00 25 66 00  25 68 64 20 25 68 64 00   .%hd.%f. %hd %hd.
15030:  25 73 20 25 68 64 20 25  66 00 25 73 20 25 68 64   %s %hd % f.%s %hd
15040:  00 73 65 6E 73 6F 72 2E  63 66 67 00 72 74 00 25   .sensor. cfg.rt.%
15050:  68 64 20 25 68 64 00 25  68 64 20 25 68 64 20 25   hd %hd.% hd %hd %
15060:  68 64 20 25 68 64 00 47  3A 5C 46 49 4E 47 45 52   hd %hd.G :\FINGER
15070:  5C 49 4D 47 49 5C 00 49  4D 47 44 5C 00 25 73 00   \IMGI\.I MGD\.%s.
15080:  00 01 00 FF FF 00 00 FF  FF 25 73 25 73 2E 63 70   ........ .%s%s.cp
15090:  73 00 77 62 00 43 50 53  44 41 54 5C 00 25 73 25   s.wb.CPS DAT\.%s%
150A0:  73 2E 63 70 73 00 72 62  00 00 00 E2 01 00 00 00   s.cps.rb ........
150B0:  00 05 11 01 B2 00 15 00  B0 5F 43 5F 46 49 4C 45   ........ ._C_FILE
150C0:  5F 49 4E 46 4F 3D 0D 00  B2 00 1C 00 B0 14 00 81   _INFO=.. ........
150D0:  81 81 01 01 07 00 B2 00  19 00 B0 1F 06 60 31 04   ........ .....`1.
150E0:  00 B2 00 0D 00 B0 FF FF  FF FF E0 10 00 00 00 00   ........ ........
150F0:  00 16 02 02 18 0D 09 0C  0C 0C 07 08 16 16 FF 02   ........ ........
15100:  0D 12 02 FF 5C 00 5C 00  00 00 E0 0D 60 31 00 00   ....\.\. ....`1..
15110:  E0 0D 60 31 01 2F 00 B2  00 0B 00 B0 02 01 02 00   ..`1./.. ........
15120:  B2 00 0A 00 B0 02 02 02  00 B2 00 0A 00 B0 84 03   ........ ........
15130:  02 00 B2 00 0A 00 B0 02  04 02 00 B2 00 B4 00 B0   ........ ........
15140:  01 00 00 02 04 00 B2 00  EC 00 B0 34 07 60 31 04   ........ ...4.`1.
15150:  00 B2 00 0C 00 B0 20 09  2D 0D 5D 00 5D 00 06 00   ...... . -.].]...
15160:  00 06 00 01 00 00 10 00  03 06 00 06 02 10 04 45   ........ .......E
15170:  45 45 05 05 05 05 05 35  30 00 50 00 00 00 00 20   EE.....5 0.P....
15180:  20 30 50 58 07 08 00 30  30 30 57 50 07 00 00 20    0PX...0 00WP...
15190:  20 00 00 00 00 00 08 60  60 60 60 60 60 00 00 70    ......` `````..p
```

```
151A0:  70 78 78 78 78 08 07 08  00 00 07 00 08 08 08 00   pxxxx... ........
151B0:  00 08 00 08 00 00 08 28  6E 75 6C 6C 29 06 68 00   .......( null).h.
151C0:  B2 00 10 00 B0 03 00 00  20 C0 02 AF 0D C0 02 AF   ........  .......
151D0:  0D C0 02 AF 0D C0 02 AF  0D C0 02 AF 0D C0 02 AF   ........ ........
151E0:  0D 00 00 00 00 01 01 00  23 00 B2 20 09 00 B0 28   ........ #.. ...(
151F0:  28 28 28 28 05 00 B2 20  12 00 B0 48 01 00 B2 10   ((((...  ...H....
15200:  0F 00 B0 84 0A 00 B0 10  10 10 10 10 10 10 81 81   ........ ........
15210:  81 81 81 81 0D 00 B2 01  14 00 B0 10 10 10 10 10   ........ ........
15220:  10 82 82 82 82 82 82 0C  00 B2 02 14 00 B0 10 10   ........ ........
15230:  10 10 20 05 00 B2 00 9E  00 B0 06 31 23 53 4E 41   .. ..... ...1#SNA
15240:  4E 06 31 23 51 4E 41 4E  05 31 23 49 4E 46 05 31   N.1#QNAN .1#INF.1
15250:  23 49 4E 44 00 00 00 00  32 13 00 80 66 24 00 80   #IND.... 2...f$..
15260:  E0 37 79 C3 41 43 00 06  31 23 53 4E 41 4E 06 31   .7y.AC.. 1#SNAN.1
15270:  23 51 4E 41 4E 05 31 23  49 4E 46 05 31 23 49 4E   #QNAN.1# INF.1#IN
15280:  44 00 FC FF FF FF FF FF  FF FE 43 65 2B 30 30 30   D....... ..Ce+000
15290:  56 00 B2 00 2D 00 B0 30  31 30 32 30 33 30 34 30   V...-..0 10203040
152A0:  35 30 36 30 37 30 38 30  39 31 30 31 31 31 32 05   50607080 9101112.
152B0:  4D 36 31 78 78 00 00 7A  41 AF 0D 5A 3C AF 0D 06   M61xx..z A..Z<...
152C0:  3D AF 0D EA 3B AF 0D D8  3C AF 0D B6 46 AF 0D FF   =...;... <...F...
152D0:  FF FF FF FF FF EF 7F 00  00 00 00 00 00 E0 00 E0   ........ ........
152E0:  00 E0 00 00 00 00 00 93  14 00 00 3A 00 24 12 69   ........ ...:.$.i
152F0:  01 93 14 B6 42 AF 0D FA  42 AF 0D 70 0F AF 0D 60   ....B... B..p...`
15300:  31 60 31 62 23 AA 14 AA  14 62 23 60 31 AA 14 AA   1`1b#... .b#`1...
15310:  14 62 23 62 23 AA 14 AA  14 AA 14 AA 14 AA 14 62   .b#b#... .......b
15320:  23 62 23 AA 14 AA 14 62  23 62 23 62 23 AA 14 AA   #b#....b #b#b#...
15330:  14 62 23 AA 14 AA 14 AA  14 62 23 60 31 AA 14 AA   .b#..... .b#`1...
15340:  14 60 31 60 31 AA 14 AA  14 AA 14 62 23 60 31 62   .`1`1... ...b#`1b
15350:  23 AA 14 62 23 AA 14 AA  14 62 23 AA 14 AA 14 AA   #..b#... .b#.....
15360:  14 AA 14 AA 14 62 23 62  23 62 23 AA 14 AA 14 AA   .....b#b #b#.....
15370:  14 62 23 AA 14 AA 14 AA  14 62 23 AA 14 AA 14 AA   .b#..... .b#.....
15380:  14 62 23 AA 14 AA 14 AA  14 62 23 62 23 AA 14 60   .b#..... .b#b#..`
15390:  31 60 31 AA 14 62 23 60  31 00 00 00 00 AA 14 AA   1`1..b#` 1.......
153A0:  14 60 31 0C 01 B2 00 08  00 B0 3C 3C 4E 4D 53 47   .`1..... ..<<NMSG
153B0:  3E 3E 00 00 52 36 30 30  30 0D 0A 2D 20 73 74 61   >>..R600 0..- sta
153C0:  63 6B 20 6F 76 65 72 66  6C 6F 77 0D 0A 00 03 00   ck overf low.....
153D0:  52 36 30 30 33 0D 0A 2D  20 69 6E 74 65 67 65 72   R6003..-  integer
153E0:  20 64 69 76 69 64 65 20  62 79 20 30 0D 0A 00 09    divide  by 0....
153F0:  00 52 36 30 30 39 0D 0A  2D 20 6E 6F 74 20 65 6E   .R6009.. - not en
15400:  6F 75 67 68 20 73 70 61  63 65 20 66 6F 72 20 65   ough spa ce for e
15410:  6E 76 69 72 6F 6E 6D 65  6E 74 0D 0A 00 FC 00 0D   nvironme nt......
15420:  0A 00 FF 00 72 75 6E 2D  74 69 6D 65 20 65 72 72   ....run- time err
15430:  6F 72 20 00 02 00 52 36  30 30 32 0D 0A 2D 20 66   or ...R6 002..- f
15440:  6C 6F 61 74 69 6E 67 2D  70 6F 69 6E 74 20 73 75   loating- point su
15450:  70 70 6F 72 74 20 6E 6F  74 20 6C 6F 61 64 65 64   pport no t loaded
15460:  0D 0A 00 01 00 52 36 30  30 31 0D 0A 2D 20 6E 75   .....R60 01..- nu
15470:  6C 6C 20 70 6F 69 6E 74  65 72 20 61 73 73 69 67   ll point er assig
15480:  6E 6D 65 6E 74 0D 0A 00  FD 00 3A 20 4D 41 54 48   nment... ..: MATH
15490:  0D 0A 2D 20 66 6C 6F 61  74 69 6E 67 2D 70 6F 69   ..- floa ting-poi
154A0:  6E 74 20 65 72 72 6F 72  3A 20 00 65 00 69 6E 76   nt error : .e.inv
154B0:  61 6C 69 64 0D 0A 00 66  00 64 65 6E 6F 72 6D 61   alid...f .denorma
154C0:  6C 0D 0A 00 67 00 64 69  76 69 64 65 20 62 79 20   l...g.di vide by
154D0:  30 0D 0A 00 68 00 6F 76  65 72 66 6C 6F 77 0D 0A   0...h.ov erflow..
154E0:  00 69 00 75 6E 64 65 72  66 6C 6F 77 0D 0A 00 6A   .i.under flow...j
```

```
154F0:  00 69 6E 65 78 61 63 74  0D 0A 00 6B 00 75 6E 65   .inexact ...k.une
15500:  6D 75 6C 61 74 65 64 0D  0A 00 6C 00 73 71 75 61   mulated. ..l.squa
15510:  72 65 20 72 6F 6F 74 0D  0A 00 6D 00 0D 0A 00 6E   re root. ..m....n
15520:  00 73 74 61 63 6B 20 6F  76 65 72 66 6C 6F 77 0D   .stack o verflow.
15530:  0A 00 6F 00 73 74 61 63  6B 20 75 6E 64 65 72 66   ..o.stac k underf
15540:  6C 6F 77 0D 0A 00 70 00  65 78 70 6C 69 63 69 74   low...p. explicit
15550:  6C 79 20 67 65 6E 65 72  61 74 65 64 0D 0A 00 FF   ly gener ated....
15560:  FF FF B8 01 B2 00 08 00  B0 FF FF FF FF FF FF FF   ........ ........
15570:  16 00 AF 0D 00 00 FB 07  20 4E 5E 32 35 32 01 00   ........  N^252..
15580:  52 42 8C C0 05 10 00 0E  1F A3 04 00 03 06 0C 00   RB...... ........
15590:  8E C0 8B 0E 06 00 8B F9  4F 8B F7 FD F3 A4 8B 16   ........ O.......
155A0:  0E 00 50 B8 38 00 50 CB  8C C3 8C D8 2B C2 8E D8   ..P.8.P. ....+...
155B0:  8E C0 BF 0F 00 B9 10 00  B0 FF F3 AE 47 8B F7 8B   ........ ....G...
155C0:  C3 2B C2 8E C0 BF 0F 00  B1 04 8B C6 F7 D0 D3 E8   .+...... ........
155D0:  74 09 8C DA 2B D0 8E DA  83 CE F0 8B C7 F7 D0 D3   t...+... ........
155E0:  E8 74 09 8C C2 2B D0 8E  C2 83 CF F0 AC 8A D0 4E   .t...+.. .......N
155F0:  AD 8B C8 46 8A C2 24 FE  3C B0 75 06 AC F3 AA EB   ...F..$. <.u.....
15600:  07 90 3C B2 75 6B F3 A4  8A C2 A8 01 74 BA BE 2D   ..<.uk.. ....t..-
15610:  01 0E 1F 8B 1E 04 00 FC  33 D2 AD 8B C8 E3 13 8B   ........ 3.......
15620:  C2 03 C3 8E C0 AD 8B F8  83 FF FF 74 11 26 01 1D   ........ ...t.&..
15630:  E2 F3 81 FA 00 F0 74 16  81 C2 00 10 EB DC 8C C0   ......t. ........
15640:  40 8E C0 83 EF 10 26 01  1D 48 8E C0 EB E2 8B C3   @.....&. .H......
15650:  8B 3E 08 00 8B 36 0A 00  03 F0 01 06 02 00 2D 10   .>...6.. ......-.
15660:  00 8E D8 8E C0 BB 00 00  FA 8E D6 8B E7 FB 2E FF   ........ ........
15670:  2F B4 40 BB 02 00 B9 16  00 8C CA 8E DA BA 17 01   /.@..... ........
15680:  CD 21 B8 FF 4C CD 21 50  61 63 6B 65 64 20 66 69   .!..L.!P acked fi
15690:  6C 65 20 69 73 20 63 6F  72 72 75 70 74 CB 02 8B   le is co rrupt...
156A0:  00 84 00 76 00 6F 00 66  00 5A 00 51 00 47 00 9B   ...v.o.f .Z.Q.G..
156B0:  01 90 01 89 01 80 01 74  01 6B 01 5E 01 4C 01 2A   .......t .k.^.L.*
156C0:  01 1E 01 CE 01 BC 01 F7  01 25 02 15 03 0D 03 F0   ........ .%......
156D0:  02 E8 02 E3 02 CF 02 B0  02 AB 02 A3 02 9C 02 93   ........ ........
156E0:  02 8C 02 47 03 32 03 71  03 5E 03 DA 04 C8 04 6E   ...G.2.q .^.....n
156F0:  04 0B 04 7C 07 35 06 1B  08 16 08 0E 08 02 08 FB   ...|.5.. ........
15700:  07 F3 07 DF 07 87 09 67  09 A1 08 7F 08 4D 0B 3F   .......g .....M.?
15710:  0B 9C 0C 31 0D 67 0D CB  0E B7 0E A7 0E F9 0D 1B   ...1.g.. ........
15720:  11 B8 10 E4 0F 81 0F 2F  16 53 14 B1 13 24 13 C3   ......./ .S...$..
15730:  16 91 16 40 17 0E 17 F7  16 C0 19 7E 19 F0 18 16   ...@.... ...~....
15740:  1C 88 1B CD 1C 86 1E 7F  1E ED 1D 66 1D 5F 1D 6A   ........ ...f._.j
15750:  23 5C 23 9C 22 BB 21 BC  26 A1 26 4D 26 31 26 FD   #\#.".!. &.&M&1&.
15760:  25 9B 25 7F 25 4B 25 C8  28 AE 28 67 28 41 28 9E   %.%.%K%. (.(g(A(.
15770:  27 A8 29 7F 29 53 29 25  29 A7 2B A0 2B 87 2B 80   '.).)S)% ).+.+.+.
15780:  2B 14 2B F7 2A 7B 2D 74  2D 5A 2D 53 2D 3B 2D 34   +.+.*{-t -Z-S-;-4
15790:  2D E6 2D C9 2D 71 2E AB  2E 26 2F FB 2E 15 30 E9   -.-.-q.. .&/...0.
157A0:  2F BE 2F 92 2F F9 30 D6  30 B3 30 C8 32 A0 32 71   /././.0. 0.0.2.2q
157B0:  32 4D 32 D6 33 CA 33 B4  33 A8 33 DD 34 B7 34 7B   2M2.3.3. 3.3.4.4{
157C0:  34 4A 34 14 34 F0 33 48  35 16 35 D7 35 0A 36 C2   4J4.4.3H 5.5.5.6.
157D0:  37 97 37 73 37 53 37 4C  37 26 37 1F 37 E5 36 D5   7.7s7S7L 7&7.7.6.
157E0:  36 BC 36 64 38 59 38 41  38 12 3A 07 3A D7 39 EB   6.6d8Y8A 8.:.:.9.
157F0:  38 E4 38 73 3D 62 3D 51  3D E1 3C CF 3C C4 3C 94   8.8s=b=Q =.<.<.<.
15800:  3C 59 3C 12 3C CF 3B 3C  3B 4F 3F 35 3F 27 3F A2   <Y<.<.;< ;O?5?'?.
15810:  3E 8C 3E 89 44 82 44 71  44 6A 44 9B 47 88 47 B7   >.>.D.Dq DjD.G.G.
15820:  46 A4 46 8E 46 7B 46 51  46 2B 4A 15 4A 8D 4B 95   F.F.F{FQ F+J.J.K.
15830:  4C 1A 4C 1A 4D C1 4C 22  4E E2 50 C6 50 7C 4F 95   L.L.M.L" N.P.P|O.
```

```
15840:  4E B0 52 8F 52 39 52 50  51 60 56 51 56 48 56 2F   N.R.R9RP Q`VQVHV/
15850:  56 26 56 10 56 87 55 7C  55 69 55 43 55 97 58 78   V&V.V.U| UiUCU.Xx
15860:  58 33 58 14 58 D8 5A C1  5A B1 5B 99 5B AF 5E A4   X3X.X.Z. Z.[.[.^.
15870:  5E 74 5E 40 5D 37 5D 7C  5F 63 5F 94 60 83 60 6D   ^t^@]7]| _c_.`.`m
15880:  60 11 60 F9 60 F2 60 EA  60 E1 60 DA 60 D2 60 C9   `.`.`.`. `.`.`.`.
15890:  60 9E 61 6F 61 6A 61 62  61 56 61 E1 61 DC 61 4A   `.aoajab aVa.a.aJ
158A0:  62 3E 62 2F 62 23 62 86  62 7F 62 77 62 6E 62 67   b>b/b#b. b.bwbnbg
158B0:  62 5F 62 5E 63 53 63 4B  63 2F 63 24 63 F2 62 E7   b_b^cScK c/c$c.b.
158C0:  62 DF 62 C6 62 BE 62 B6  62 87 67 6A 67 46 67 27   b.b.b.b. b.gjgFg'
158D0:  67 EF 66 BC 66 46 66 CB  65 A8 65 56 65 1A 65 FE   g.f.fFf. e.eVe.e.
158E0:  64 CA 64 7C 64 77 64 6F  64 68 64 60 64 54 64 4D   d.d|dwdo dhd`dTdM
158F0:  64 45 64 F8 63 0C 68 CB  67 B9 68 A2 68 09 6A D9   dEd.c.h. g.h.h.j.
15900:  69 B5 69 30 69 00 6B C9  6A 2A 6D 23 6D FF 6C F4   i.i0i.k. j*m#m.l.
15910:  6C B2 6C EB 71 E0 71 9E  71 12 71 B5 70 5D 76 E3   l.l.q.q. q.q.p]v.
15920:  78 D1 78 B8 77 72 77 3B  77 04 77 92 7D 6F 7D 64   x.x.wrw; w.w.}o}d
15930:  7D 4C 7D 36 7D 2B 7D 13  7D EF 7C A3 7C 85 7C 3D   }L}6}+}. }.|.|.|=
15940:  7C 2A 7C CA 7A B4 7A 8C  7A 7A 7A 15 7E 32 85 27   |*|.z.z. zzz.~2.'
15950:  85 0F 85 F9 84 E7 84 7E  84 0B 86 3D 86 AA 86 93   .......~ ...=....
15960:  86 69 87 57 87 4C 87 17  87 81 88 6E 88 5F 88 11   .i.W.L.. ...n._..
15970:  88 F4 87 BA 87 F9 89 CA  89 20 8C 5C 8C 46 8C 65   ........ . .\.F.e
15980:  8D 4C 8D 20 8D 02 8D D3  8C B5 8C E3 8D D5 8D C2   .L. .... ........
15990:  8D B1 8D 97 8D 75 90 51  90 BF 8F 9B 8F 32 93 24   .....u.Q .....2.$
159A0:  92 74 91 40 94 83 95 68  95 36 95 04 95 CF 95 F4   .t.@...h .6......
159B0:  95 14 96 3A 96 C9 97 C2  97 88 99 81 99 94 9C 81   ...:.... ........
159C0:  9C 3F 9D 1E 9D FA 9C EC  9C 5F 9E 91 9E 89 9E BC   .?...... ._......
159D0:  9E B4 9E AB 9E 06 9F E6  9E DF 9E D6 9E 6A 9F 63   ........ .....j.c
159E0:  9F C9 9F B7 9F B0 9F AB  A3 82 A3 79 A3 FE A2 EC   ........ ...y....
159F0:  A2 E1 A2 B1 A2 83 A2 78  A2 48 A2 1A A2 C8 A1 19   .......x .H......
15A00:  A6 E7 A5 59 A6 42 A6 B0  A7 9E A7 1A AA 99 A9 92   ...Y.B.. ........
15A10:  A9 8A A9 81 A9 7A A9 6C  A9 CB A8 B8 A8 07 AD C4   .....z.l ........
15A20:  AC BD AC B5 AC AC AC A5  AC 97 AC 24 AC 11 AC FA   ........ ...$....
15A30:  AA E8 AA 21 AD 66 AF 2A  AF 8A AE 65 AE 40 AE 0E   ...!.f.* ...e.@..
15A40:  AE F4 AD B7 AD B8 B0 9D  B0 83 B0 6B B0 51 B0 E5   ........ ...k.Q..
15A50:  AF C7 B1 B9 B1 A2 B1 7E  B1 1D B2 86 B2 74 B2 55   .......~ .....t.U
15A60:  B2 50 B3 38 B3 16 B3 F7  B2 B8 B2 E0 B4 CE B4 AE   .P.8.... ........
15A70:  B4 83 B4 35 B4 26 B4 03  B4 97 B5 7F B5 5D B5 46   ...5.&.. .....].F
15A80:  B5 8C B9 6A B9 4A B9 1F  B9 99 B8 7B B8 59 B8 37   ...j.J.. ...{.Y.7
15A90:  B8 17 B8 A4 B7 92 B7 72  B7 47 B7 21 B7 01 B7 D9   .......r .G.!....
15AA0:  B6 3D B6 2B B6 0B B6 E8  B5 A4 B9 A3 BA 85 BA 64   .=.+.... .......d
15AB0:  BA 42 BA 23 BA 00 BA 31  BB 22 BB 6A BC 38 BC 16   .B.#...1 .".j.8..
15AC0:  BC F5 BB DE BB BB BB 6E  BB 67 BB 53 C0 48 C0 22   .......n .g.S.H."
15AD0:  C0 F7 BF E8 BF A9 BF 9A  BF 5B BF 4C BF 18 BF 09   ........ .[.L....
15AE0:  BF CA BE BB BE 7C BE 6D  BE 39 BE 2A BE 0B BE E7   .....|.m .9.*....
15AF0:  BD D8 BD A4 BD 95 BD FE  C0 CC C0 7A C2 3B C2 FC   ........ ...z.;..
15B00:  C1 BD C1 EC C2 5C C3 55  C3 4D C3 36 C3 86 C4 7F   .....\.U .M.6....
15B10:  C4 51 C4 4A C4 7C C6 6C  C6 45 C6 33 C6 0F C6 D3   .Q.J.|.l .E.3....
15B20:  C5 AA C6 6A C7 3D C7 E2  C6 D2 C6 CD C8 BA C8 8A   ...j.=.. ........
15B30:  C8 77 C8 67 C8 57 C8 3F  C8 19 C8 FE C7 D3 C7 41   .w.g.W.? .......A
15B40:  C9 2E C9 76 C9 22 CA 11  CA 05 CA FE C9 CC C9 A9   ...v.".. ........
15B50:  C9 5A CB CB CA BA CA A9  CA 6F CA 50 CA AC CC A7   .Z...... .o.P....
15B60:  CC A2 CC 9A CC 8C CC 66  CC 4F CC 3E CC 36 CC 2D   .......f .O.>.6.-
15B70:  CC 09 CC EA CC D5 CC 1E  CD 5A CD 82 CD B5 CD A9   ........ .Z......
15B80:  CD 99 CD 33 CE 27 CE 0E  CE 8A CE 6B CE 5F CE 7F   ...3.'.. ...k._..
```

```
15B90:  D2 F4 D2 DE D2 A3 D3 8A  D3 51 D3 40 D3 E8 D6 A4   ........ .Q.@....
15BA0:  D7 94 D7 8D D7 84 D7 7D  D7 75 D7 53 D7 4C D7 3E   .......} .u.S.L.>
15BB0:  D7 37 D7 3D D8 2D D8 20  D8 17 D8 10 D8 EE D7 E7   .7.=.-.  ........
15BC0:  D7 D9 D7 D2 D7 B6 D8 93  D8 70 D8 29 D9 06 D9 E3   ........ .p.)....
15BD0:  D8 8B D9 51 D9 46 D9 F0  D9 B6 D9 AB D9 6C DA 49   ...Q.F.. .....l.I
15BE0:  DA 26 DA E5 DA C2 DA 9F  DA 14 DB A2 DB A7 DB AE   .&...... ........
15BF0:  DB C9 DB 03 DC 24 DD BD  E0 D8 E1 CB E1 B1 E1 90   .....$.. ........
15C00:  E1 74 E1 4F E1 39 E2 1E  E2 F9 E1 65 E2 0C E4 D1   .t.O.9.. ...e....
15C10:  E5 08 E6 B5 E7 E0 E7 C5  E8 82 E9 93 EA 36 EA 71   ........ .....6.q
15C20:  EC BD EA 84 EF 72 EF E4  EE CB F2 AD F2 A2 FC B1   .....r.. ........
15C30:  FD B7 FD 5D FF 26 00 40  22 67 01 58 01 46 02 F5   ...].&.@ "g.X.F..
15C40:  02 E4 03 C0 03 33 04 18  04 53 04 6B 05 A5 22 AF   .....3.. .S.k..".
15C50:  22 06 23 1C 23 7D 23 A4  23 C6 23 0C 24 5B 1B A9   ".#.#}#. #.#.$[..
15C60:  1A 79 1A 5C 19 02 19 C1  18 4B 18 2D 18 0D 18 F8   .y.\.... .K.-....
15C70:  1C DE 1C EB 1B AF 1B A9  1D B9 1D CE 1D D7 1D E3   ........ ........
15C80:  1D E8 1D 00 00 66 00 E4  20 E6 20 E8 20 EA 20 EC   .....f..  . . . .
15C90:  20 EE 20 F0 20 F2 20 F4  20 F6 20 F8 20 FA 20 FC    . . . .  . . . .
15CA0:  20 FE 20 00 21 02 21 04  21 06 21 08 21 0A 21 0C    . .!.!. !.!.!.!.
15CB0:  21 0E 21 10 21 12 21 14  21 16 21 18 21 1A 21 1C   !.!.!.!. !.!.!.!.
15CC0:  21 1E 21 20 21 22 21 24  21 26 21 28 21 2A 21 2C   !.! !"!$ !&!(!*!,
15CD0:  21 2E 21 30 21 32 21 34  21 36 21 38 21 3A 21 3C   !.!0!2!4 !6!8!:!<
15CE0:  21 3E 21 40 21 42 21 44  21 46 21 48 21 4A 21 4C   !>!@!B!D !F!H!J!L
15CF0:  21 4E 21 50 21 52 21 54  21 56 21 58 21 5A 21 5C   !N!P!R!T !V!X!Z!\
15D00:  21 5E 21 60 21 62 21 64  21 66 21 68 21 6A 21 6C   !^!`!b!d !f!h!j!l
15D10:  21 6E 21 70 21 72 21 74  21 76 21 78 21 7A 21 7C   !n!p!r!t !v!x!z!|
15D20:  21 82 21 84 21 CC 20 1D  1C E2 20 58 1C 52 1C 32   !.!.!. . .. X.R.2
15D30:  1E 86 21 BE 1E C2 1E C6  1E CA 1E CE 1E D2 1E D2   ..!..... ........
15D40:  20 D6 20 DA 20 9E 20 A2  20 A6 20 AA 20 AE 20 B2    . . . .  . . . .
15D50:  20 DE 20 00 00 00 00 00  00 00 00 00 00 00 00 00    . ..... ........
15D60:  00 00 00 00 00 00 00 00  00 00 00                  ........ ...
```

# APPENDIX E

SAMPLE.DMP  Thursday, January 6, 1994 12:01pm  Page 1

PSA Binary File Dump utility version 1.9
Copyright (C) 1984 by Phoenix Software Associates, Ltd.

Dump of SAMPLE.PCK

```
   0:  4D 5A 31 00 68 00 00 00  20 00 01 12 FF FF CD 19   MZ1.h... ........
  10:  80 00 00 00 12 00 6B 0C  1E 00 00 00 01 00 00 00   ......k. ........
  20:  00 00 00 00 00 00 00 00  00 00 00 00 00 00 00 00   ........ ........
  30:  00 00 00 00 00 00 00 00  00 00 00 00 00 00 00 00   ........ ........
  40:  00 00 00 00 00 00 00 00  00 00 00 00 00 00 00 00   ........ ........
  50:  00 00 00 00 00 00 00 00  00 00 00 00 00 00 00 00   ........ ........
  60:  00 00 00 00 00 00 00 00  00 00 00 00 00 00 00 00   ........ ........
  70:  00 00 00 00 00 00 00 00  00 00 00 00 00 00 00 00   ........ ........
  80:  00 00 00 00 00 00 00 00  00 00 00 00 00 00 00 00   ........ ........
  90:  00 00 00 00 00 00 00 00  00 00 00 00 00 00 00 00   ........ ........
  A0:  00 00 00 00 00 00 00 00  00 00 00 00 00 00 00 00   ........ ........
  B0:  00 00 00 00 00 00 00 00  00 00 00 00 00 00 00 00   ........ ........
  C0:  00 00 00 00 00 00 00 00  00 00 00 00 00 00 00 00   ........ ........
  D0:  00 00 00 00 00 00 00 00  00 00 00 00 00 00 00 00   ........ ........
  E0:  00 00 00 00 00 00 00 00  00 00 00 00 00 00 00 00   ........ ........
  F0:  00 00 00 00 00 00 00 00  00 00 00 00 00 00 00 00   ........ ........
 100:  00 00 00 00 00 00 00 00  00 00 00 00 00 00 00 00   ........ ........
 110:  00 00 00 00 00 00 00 00  00 00 00 00 00 00 00 00   ........ ........
 120:  00 00 00 00 00 00 00 00  00 00 00 00 00 00 00 00   ........ ........
 130:  00 00 00 00 00 00 00 00  00 00 00 00 00 00 00 00   ........ ........
 140:  00 00 00 00 00 00 00 00  00 00 00 00 00 00 00 00   ........ ........
 150:  00 00 00 00 00 00 00 00  00 00 00 00 00 00 00 00   ........ ........
 160:  00 00 00 00 00 00 00 00  00 00 00 00 00 00 00 00   ........ ........
 170:  00 00 00 00 00 00 00 00  00 00 00 00 00 00 00 00   ........ ........
 180:  00 00 00 00 00 00 00 00  00 00 00 00 00 00 00 00   ........ ........
 190:  00 00 00 00 00 00 00 00  00 00 00 00 00 00 00 00   ........ ........
 1A0:  00 00 00 00 00 00 00 00  00 00 00 00 00 00 00 00   ........ ........
 1B0:  00 00 00 00 00 00 00 00  00 00 00 00 00 00 00 00   ........ ........
 1C0:  00 00 00 00 00 00 00 00  00 00 00 00 00 00 00 00   ........ ........
 1D0:  00 00 00 00 00 00 00 00  00 00 00 00 00 00 00 00   ........ ........
 1E0:  00 00 00 00 00 00 00 00  00 00 00 00 00 00 00 00   ........ ........
 1F0:  00 00 00 00 00 00 00 00  00 00 00 00 00 00 00 00   ........ ........
 200:  55 8B EC 81 EC 1A 00 57  56 B8 04 00 50 9A 00 00   U......W V...P...
 210:  98 00 83 C4 02 B8 42 00  1E 50 9A BE 0A 35 04 83   ......B. .P...5..
 220:  C4 04 8D 46 F6 16 50 B9  70 00 1E 51 9A 02 0B 35   ...F..P. p..Q...5
 230:  04 83 C4 08 B8 73 00 1E  50 8D 46 F6 16 50 9A 34   .....s.. P.F..P.4
 240:  26 35 04 83 C4 08 3D 00  00 74 03 E9 03 00 E9 78   &5....=. .t.....x
 250:  00 C7 46 F4 01 00 FF 76  F4 8D 46 F6 16 50 B8 78   ..F....v ..F..P.x
 260:  00 1E 50 8D 46 E8 16 50  9A A2 2A 35 04 83 C4 0E   ..P.F..P ..*5....
 270:  9A E8 03 98 00 89 46 E6  3D 00 00 74 03 E9 13 00   ......F. =..t....
 280:  8D 46 E8 16 50 9A 67 05  98 00 83 C4 04 FF 46 F4   .F..P.g. ......F.
 290:  E9 30 00 83 7E E6 F4 74  03 E9 06 00 E9 B7 FF E9   .0..¯..t ........
 2A0:  21 00 83 7E E6 F7 75 03  E9 15 00 B8 12 00 50 B8   !..¯..u. ......P.
 2B0:  01 00 50 B8 7E 00 1E 50  9A 27 05 98 00 83 C4 08   ..P.¯..P .'......
 2C0:  E9 03 00 E9 90 FF E9 4C  FF 9A 8B 08 0D 00 5E 5F   .......L ......_
 2D0:  8B E5 5D CB 55 8B EC 81  EC 14 00 57 56 83 7E 06   ..].U... ...WV.¯.
 2E0:  00 75 03 E9 19 00 9A 23  04 0D 00 3D 00 00 75 03   .u.....# ...=..u.
 2F0:  E9 09 00 B8 00 00 BA 00  00 E9 F1 01 E9 3F 00 C7   ........ .....?..
 300:  46 EE 01 00 E9 03 00 FF  46 EE 83 7E EE 06 7C 03   F....... F..¯..|.
 310:  E9 2B 00 FF 76 0E FF 76  0C FF 76 0A FF 76 08 FF   .+..v..v ..v..v..
```

SAMPLE.DMP Thursday, January 6, 1994 12:01pm Page 2

```
320:  76 EE 9A 23 02 0D 00 83  C4 0A 3D 00 00 75 03 E9   v..#.... ..=..u..
330:  09 00 B8 00 00 BA 00 00  E9 B2 01 E9 C9 FF FF 36   ........ .......6
340:  36 0F FF 36 34 0F 9A 8C  1D 35 04 83 C4 04 FF 36   6..64... .5.....6
350:  36 0F FF 36 34 0F 8B F0  9A 8C 1D 35 04 83 C4 04   6..64... ...5....
360:  8B C8 80 C1 08 D3 E6 89  76 EC FF 36 36 0F FF 36   ........ v..66..6
370:  34 0F B8 04 00 50 B8 02  00 50 8D 46 F6 16 50 9A   4....P.. .P.F..P.
380:  94 07 35 04 83 C4 0C FF  36 36 0F FF 36 34 0F 9A   ..5..... 66..64..
390:  8C 1D 35 04 83 C4 04 3D  0A 00 75 03 E9 03 00 E9   ..5....= ..u.....
3A0:  E5 FF 83 7E 10 00 75 03  E9 5B 00 8E 06 48 0D 26   ...~..u. .[...H.&
3B0:  FF 36 8C 04 8E 06 4A 0D  26 FF 36 8A 04 9A 65 08   .6....J. &.6...e.
3C0:  0D 00 83 C4 04 8E 06 4C  0D 26 A3 D0 65 26 89 16   .......L .&..e&..
3D0:  D2 65 26 A1 D2 65 26 0B  06 D0 65 74 03 E9 26 00   .e&..e&. ..et..&.
3E0:  B8 8C 00 1E 50 9A BE 0A  35 04 83 C4 04 FF 36 36   ....P... 5.....66
3F0:  0F FF 36 34 0F 9A 3E 06  35 04 83 C4 04 B8 00 00   ..64..>. 5.......
400:  BA 00 00 E9 E7 00 2B C0  89 46 F4 89 46 F2 C7 46   ......+. .F..F..F
410:  EE 00 00 E9 12 00 FF 46  EE 8E 06 4A 0D 26 A1 8A   .......F ...J.&..
420:  04 99 01 46 F2 11 56 F4  8E 06 48 0D 8B 46 EE 26   ...F..V. ..H..F.&
430:  39 06 8C 04 7F 03 E9 78  00 FF 36 36 0F FF 36 34   9......x ..66..64
440:  0F 8E 06 4A 0D 26 FF 36  8A 04 B8 01 00 50 8B 46   ...J.&.6 .....P.F
450:  F2 8B 56 F4 8E 06 4C 0D  26 03 06 D0 65 83 D2 00   ..V...L. &...e...
460:  B9 0C 00 D3 E2 26 03 16  D2 65 52 50 9A 94 07 35   .....&.. .eRP...5
470:  04 83 C4 0C 89 46 F0 8E  06 4A 0D 8B 46 F0 26 39   .....F.. .J..F.&9
480:  06 8A 04 7F 03 E9 26 00  FF 36 36 0F FF 36 34 0F   ......&. .66..64.
490:  9A 3E 06 35 04 83 C4 04  B8 A1 00 1E 50 9A BE 0A   .>.5.... ....P...
4A0:  35 04 83 C4 04 B8 00 00  BA 00 00 E9 3F 00 E9 65   5....... ....?..e
4B0:  FF FF 36 36 0F FF 36 34  0F 9A 3E 06 35 04 83 C4   ..66..64 ..>.5...
4C0:  04 8E 06 4A 0D 26 A1 8A  04 C4 5E 12 26 89 07 8E   ...J.&.. ..^.&...
4D0:  06 48 0D 26 A1 8C 04 C4  5E 16 26 89 07 8E 06 4C   .H.&.... ^.&....L
4E0:  0D 26 A1 D0 65 26 8B 16  D2 65 E9 00 00 5E 5F 8B   .&..e&.. .e...^_.
4F0:  E5 5D CB 55 8B EC 81 EC  06 00 57 56 C7 46 FA 00   .].U.... ..WV.F..
500:  00 8B 46 06 E9 BF 01 83  7E 0C 00 7D 03 E9 0A 00   ..F..... ~..}....
510:  81 7E 0C 00 04 7F 03 E9  15 00 FF 76 0C B8 FB 00   .~...... ...v....
520:  1E 50 9A BE 0A 35 04 83  C4 06 C7 46 FA 01 00 E9   .P...5.. ...F....
530:  B5 01 83 7E 0E 00 7D 03  E9 0A 00 81 7E 0E 00 04   ...~..}. ....~...
540:  7F 03 E9 15 00 FF 76 0E  B8 18 01 1E 50 9A BE 0A   ......v. ....P...
550:  35 04 83 C4 06 C7 46 FA  01 00 E9 8A 01 B8 35 01   5.....F. ......5.
560:  1E 50 FF 76 0A FF 76 08  9A 38 07 35 04 83 C4 08   .P.v..v. .8.5....
570:  A3 34 0F 89 16 36 0F A1  36 0F 0B 06 34 0F 74 03   .4...6.. 6...4.t.
580:  E9 18 00 FF 76 0A FF 76  08 B8 38 01 1E 50 9A BE   ....v..v ..8..P..
590:  0A 35 04 83 C4 08 C7 46  FA 01 00 E9 49 01 FF 36   .5.....F ....I..6
5A0:  36 0F FF 36 34 0F 9A 8C  1D 35 04 83 C4 04 FF 36   6..64... .5.....6
5B0:  36 0F FF 36 34 0F 9A 8C  1D 35 04 83 C4 04 FF 36   6..64... .5.....6
5C0:  36 0F FF 36 34 0F 9A 8C  1D 35 04 83 C4 04 89 46   6..64... .5.....F
5D0:  FE FF 36 36 0F FF 36 34  0F 9A 8C 1D 35 04 83 C4   ..66..64 ....5...
5E0:  04 8A E0 2A C0 01 46 FE  8E 06 4A 0D 26 83 3E 8A   ...*..F. ..J.&.>.
5F0:  04 00 74 03 E9 07 00 8B  46 FE 26 A3 8A 04 A1 EC   ..t..... F.&.....
600:  00 39 46 FE 7E 03 E9 11  00 8E 06 4A 0D 8B 46 FE   .9F.~... ...J..F.
610:  26 39 06 8A 04 75 03 E9  2E 00 8E 06 4A 0D 26 FF   &9...u.. ....J.&.
620:  36 8A 04 FF 76 FE B8 4B  01 1E 50 9A BE 0A 35 04   6...v..K ..P...5.
630:  83 C4 08 FF 36 36 0F FF  36 34 0F 9A 3E 06 35 04   ....66.. 64..>.5.
640:  83 C4 04 C7 46 FA 01 00  E9 9C 00 FF 36 36 0F FF   ....F... ....66..
650:  36 34 0F 9A 8C 1D 35 04  83 C4 04 89 46 FC FF 36   64....5. ....F..6
660:  36 0F FF 36 34 0F 9A 8C  1D 35 04 83 C4 04 8A E0   6..64... .5......
670:  2A C0 01 46 FC 8E 06 48  0D 26 83 3E 8C 04 00 74   *..F...H .&.>...t
```

SAMPLE.DMP Thursday, January 6, 1994 12:01pm Page 3

```
680:  03 E9 07 00 8B 46 FC 26  A3 8C 04 A1 EE 00 39 46   .....F.& ......9F
690:  FC 7E 03 E9 11 00 8E 06  48 0D 8B 46 FC 26 39 06   .~...... H..F.&9.
6A0:  8C 04 75 03 E9 19 00 8E  06 48 0D 26 FF 36 8C 04   ..u..... .H.&.6..
6B0:  FF 76 FC B8 7E 01 1E 50  9A BE 0A 35 04 83 C4 08   .v..~..P ...5....
6C0:  E9 24 00 E9 21 00 48 75  03 E9 3B FE 48 75 03 E9   .$..!.Hu ..;.Hu..
6D0:  60 FE 48 75 03 E9 85 FE  48 75 03 E9 C0 FE 48 75   `.Hu.... Hu....Hu
6E0:  03 E9 67 FF E9 00 00 8B  46 FA E9 00 00 5E 5F 8B   ..g..... F....^_.
6F0:  E5 5D CB 55 8B EC 81 EC  00 00 57 56 B8 00 00 E9   .].U.... ..WV....
700:  00 00 5E 5F 8B E5 5D CB  55 8B EC 81 EC 0A 02 57   ..^_..]. U......W
710:  56 B8 AE 01 1E 50 FF 76  08 FF 76 06 9A 38 07 35   V....P.v ..v..8.5
720:  04 83 C4 08 89 46 F8 89  56 FA FF 76 FA FF 76 F8   .....F.. V..v..v.
730:  B8 B1 01 1E 50 9A 40 2A  35 04 83 C4 08 FF 76 FA   ....P.@* 5.....v.
740:  FF 76 F8 FF 76 0E 9A 5C  1D 35 04 83 C4 06 FF 76   .v..v..\ .5.....v
750:  FA FF 76 F8 8A 46 0F 98  50 9A 5C 1D 35 04 83 C4   ..v..F.. P.\.5...
760:  06 FF 76 FA FF 76 F8 FF  76 10 9A 5C 1D 35 04 83   ..v..v.. v..\.5..
770:  C4 06 FF 76 FA FF 76 F8  8A 46 11 98 50 9A 5C 1D   ...v..v. .F..P.\.
780:  35 04 83 C4 06 C7 86 F6  FD 00 00 E9 04 00 FF 86   5....... ........
790:  F6 FD 83 BE F6 FD 0A 7C  03 E9 15 00 FF 76 FA FF   .......| .....v..
7A0:  76 F8 B8 00 00 50 9A 5C  1D 35 04 83 C4 06 E9 DD   v....P.\ .5......
7B0:  FF FF 76 FA FF 76 F8 B8  20 00 50 9A 5C 1D 35 04   ..v..v..  .P.\.5.
7C0:  83 C4 06 FF 76 FA FF 76  F8 B8 0A 00 50 9A 5C 1D   ....v..v ....P.\.
7D0:  35 04 83 C4 06 8B 46 0A  8B 56 0C 89 46 FC 89 56   5.....F. .V..F..V
7E0:  FE C7 86 F6 FD 00 00 E9  04 00 FF 86 F6 FD 8B 46   ........ .......F
7F0:  10 39 86 F6 FD 7C 03 E9  4A 00 FF 76 0E FF 76 FE   .9...|.. J..v..v.
800:  FF 76 FC 8D 86 F8 FD 16  50 9A BA 31 35 04 83 C4   .v...... P..15...
810:  0A FF 76 FA FF 76 F8 FF  76 0E B8 01 00 50 8D 86   ..v..v.. v....P..
820:  F8 FD 16 50 9A 26 09 35  04 83 C4 0C 8B 46 0E 99   ...P.&.5 .....F..
830:  2B DB 8B C8 01 4E FC 13  DA B9 0C 00 D3 E3 01 5E   +....N.. .......^
840:  FE E9 A6 FF FF 76 FA FF  76 F8 9A 3E 06 35 04 83   .....v.. v..>.5..
850:  C4 04 5E 5F 8B E5 5D CB  55 8B EC 81 EC 00 00 57   ..^_..]. U......W
860:  56 A1 C6 00 2B 06 C8 00  8E 06 4A 0D 26 A3 8A 04   V...+... ..J.&...
870:  A1 CA 00 2B 06 CC 00 8E  06 48 0D 26 A3 8C 04 5E   ...+.... .H.&...^
880:  5F 8B E5 5D CB 55 8B EC  81 EC 00 00 57 56 8E 06   _..].U.. ....WV..
890:  4A 0D 26 A1 8A 04 C4 5E  06 26 89 07 8E 06 48 0D   J.&....^ .&....H.
8A0:  26 A1 8C 04 C4 5E 0A 26  89 07 5E 5F 8B E5 5D CB   &....^.& ..^_..].
8B0:  55 8B EC 81 EC 76 00 57  56 8D 7E F4 BE B4 01 8C   U....v.W V.~.....
8C0:  D0 8E C0 B9 06 00 F3 A5  C6 46 8A 00 B8 C0 01 1E   ........ .F......
8D0:  50 8D 46 F4 16 50 9A 38  07 35 04 83 C4 08 89 46   P.F..P.8 .5.....F
8E0:  F0 89 56 F2 0B D0 75 03  E9 0D 01 80 7E 8A 21 75   ..V...u. ....~.!u
8F0:  03 E9 1A 00 FF 76 F2 FF  76 F0 B8 64 00 50 8D 46   .....v.. v..d.P.F
900:  8A 16 50 9A C6 29 35 04  83 C4 0A E9 DD FF FF 76   ..P..)5. .......v
910:  08 FF 76 06 B8 C3 01 1E  50 8D 46 8B 16 50 9A 0E   ..v..... P.F..P..
920:  2B 35 04 83 C4 0C C7 46  EE 00 00 C4 5E 06 8B 46   +5.....F ....^..F
930:  EE 26 39 07 75 03 E9 72  00 C6 46 8A 00 80 7E 8A   .&9.u..r ..F...~.
940:  21 75 03 E9 4B 00 FF 76  F2 FF 76 F0 B8 64 00 50   !u..K..v ..v..d.P
950:  8D 46 8A 16 50 9A C6 29  35 04 83 C4 0A C4 5E F0   .F..P..) 5.....^.
960:  26 F6 47 0A 10 75 03 E9  24 00 8D 46 F4 16 50 C4   &.G..u.. $..F..P.
970:  5E 06 26 FF 37 B8 C7 01  1E 50 9A BE 0A 35 04 83   ^.&.7... .P...5..
980:  C4 0A B8 F5 FF 50 9A DF  01 35 04 83 C4 02 E9 AC   .....P.. .5......
990:  FF 8D 46 EE 16 50 B8 E6  01 1E 50 8D 46 8B 16 50   ..F..P.. ..P.F..P
9A0:  9A 0E 2B 35 04 83 C4 0C  E9 80 FF FF 76 20 FF 76   ..+5.... ....v .v
9B0:  1E FF 76 1C FF 76 1A FF  76 18 FF 76 16 FF 76 14   ..v..v.. v..v..v.
9C0:  FF 76 12 FF 76 10 FF 76  0E FF 76 0C FF 76 0A FF   .v..v..v ..v..v..
9D0:  76 08 FF 76 06 B8 EA 01  1E 50 8D 46 8B 16 50 9A   v..v.... .P.F..P.
```

SAMPLE.DMP Thursday, January 6, 1994 12:01pm Page 4

```
9E0:  0E 2B 35 04 83 C4 24 FF  76 F2 FF 76 F0 9A 3E 06   .+5...$. v..v..>.
9F0:  35 04 83 C4 04 E9 1E 00  8D 46 F4 16 50 B8 06 02   5....... .F..P...
A00:  1E 50 9A BE 0A 35 04 83  C4 08 B8 FF FF 50 9A DF   .P...5.. .....P..
A10:  01 35 04 83 C4 02 5E 5F  8B E5 5D CB 55 8B EC 81   .5....^_ ..].U...
A20:  EC 02 00 57 56 8D 46 FE  16 50 B8 CC 00 1E 50 B8   ...WV.F. .P....P.
A30:  CA 00 1E 50 B8 C8 00 1E  50 B8 C6 00 1E 50 B8 8E   ...P.... P....P..
A40:  04 B9 80 18 51 50 B8 DC  65 B9 C2 0B 51 50 9A E0   ....QP.. e...QP..
A50:  05 0D 00 83 C4 1C 9A 9B  07 0D 00 9A 88 05 0D 00   ........ ........
A60:  9A 58 05 98 00 5E 5F 8B  E5 5D CB 55 8B EC 81 EC   .X...^_. .].U....
A70:  00 00 57 56 8E 06 4E 0D  26 A1 DC 65 E9 42 00 B8   ..WV..N. &..e.B..
A80:  15 02 1E 50 B8 CE 00 1E  50 9A FE 25 35 04 83 C4   ...P.... P..%5...
A90:  08 E9 44 00 B8 25 02 1E  50 B8 CE 00 1E 50 9A FE   ..D..%.. P....P..
AA0:  25 35 04 83 C4 08 E9 2F  00 B8 35 02 1E 50 B8 CE   %5...../ ..5..P..
AB0:  00 1E 50 9A FE 25 35 04  83 C4 08 E9 1A 00 E9 17   ..P..%5. ........
AC0:  00 48 48 75 03 E9 B7 FF  48 48 75 03 E9 C5 FF 48   .HHu.... HHu....H
AD0:  75 03 E9 D4 FF E9 00 00  5E 5F 8B E5 5D CB 55 8B   u....... ^_..].U.
AE0:  EC 81 EC 00 00 57 56 B8  47 02 1E 50 B8 CE 00 1E   .....WV. G..P....
AF0:  50 9A FE 25 35 04 83 C4  08 5E 5F 8B E5 5D CB 55   P..%5... .^_..].U
B00:  8B EC 81 EC 00 00 57 56  FF 76 08 FF 76 06 9A 65   ......WV .v..v..e
B10:  08 0D 00 83 C4 04 8E 06  4C 0D 26 A3 D0 65 26 89   ........ L.&..e&.
B20:  16 D2 65 26 A1 D0 65 26  8B 16 D2 65 E9 00 00 5E   ..e&..e& ...e...^
B30:  5F 8B E5 5D CB 55 8B EC  81 EC 00 00 57 56 B8 01   _..].U.. ....WV..
B40:  00 50 8B 46 08 F7 6E 06  52 50 9A 66 2B 35 04 83   .P.F..n. RP.f+5..
B50:  C4 06 E9 00 00 5E 5F 8B  E5 5D CB 55 8B EC 81 EC   .....^_. .].U....
B60:  00 00 57 56 8E 06 4C 0D  26 FF 36 D2 65 26 FF 36   ..WV..L. &.6.e&.6
B70:  D0 65 9A 5A 2B 35 04 83  C4 04 5E 5F 8B E5 5D CB   .e.Z+5.. ..^_..].
B80:  55 8B EC 81 EC 00 00 57  56 8B 46 06 A3 52 0F 9A   U......W V.F..R..
B90:  0E 08 0D 00 B8 3A 0F 1E  50 B9 38 0F 1E 51 9A B5   .....:.. P.8..Q..
BA0:  05 0D 00 83 C4 08 FF 36  3A 0F FF 36 38 0F 9A 65   .......6 :..68..e
BB0:  08 0D 00 83 C4 04 8E 06  50 0D 26 A3 D0 65 26 89   ........ P.&..e&.
BC0:  16 D2 65 26 A1 D2 65 26  0B 06 D0 65 74 03 E9 13   ..e&..e& ...et...
BD0:  00 B8 4E 02 1E 50 9A BE  0A 35 04 83 C4 04 B8 FE   ..N..P.. .5......
BE0:  FF E9 25 00 8E 06 50 0D  26 A1 D0 65 26 8B 16 D2   ..%...P. &..e&...
BF0:  65 8E 06 52 0D 26 A3 02  00 26 89 16 04 00 9A D3   e..R.&.. .&......
C00:  03 F4 00 B8 00 00 E9 00  00 5E 5F 8B E5 5D CB 55   ........ .^_..].U
C10:  8B EC 81 EC 64 03 57 56  A1 66 02 40 89 86 9C FC   ....d.WV .f.@....
C20:  B8 0A 00 50 8D 86 A6 FE  16 50 FF B6 9C FC 9A 8E   ...P.... .P......
C30:  27 35 04 83 C4 08 83 3E  52 0F 07 74 03 E9 61 00   '5.....> R..t..a.
C40:  FF 36 68 02 FF 36 64 02  B8 00 00 B9 C2 0B 51 50   .6h..6d. ......QP
C50:  B8 6A 02 1E 50 B8 3C 0F  1E 50 9A A2 2A 35 04 83   .j..P.<. .P..*5..
C60:  C4 10 8D 86 A6 FE 16 50  B8 3C 0F 1E 50 B8 73 02   .......P .<..P.s.
C70:  1E 50 8D 46 B0 16 50 9A  A2 2A 35 04 83 C4 10 B8   .P.F..P. .*5.....
C80:  01 00 50 50 8D 46 B0 16  50 9A 27 05 98 00 83 C4   ..PP.F.. P.'.....
C90:  08 C6 06 55 0F 00 9A 72  29 35 04 A2 54 0F E9 54   ...U...r )5..T..T
CA0:  00 B8 01 00 50 50 B8 99  02 1E 50 9A 27 05 98 00   ....PP.. ..P.'...
CB0:  83 C4 08 8D 86 AC FE 16  50 B9 B8 02 1E 51 9A 02   ........ P....Q..
CC0:  0B 35 04 83 C4 08 80 BE  AC FE 2C 75 03 E9 13 00   .5...... ..,u....
CD0:  8D 86 AC FE 16 50 B8 54  0F 1E 50 9A FE 25 35 04   .....P.T ..P..%5.
CE0:  83 C4 08 B8 54 0F 1E 50  B8 3C 0F 1E 50 9A FE 25   ....T..P .<..P..%
CF0:  35 04 83 C4 08 80 3E 54  0F 2E 75 03 E9 95 01 80   5.....>T ..u.....
D00:  3E 54 0F 2A 75 03 E9 8B  01 80 3E 54 0F 24 75 03   >T.*u... ..>T.$u.
D10:  E9 81 01 B8 14 00 50 B8  01 00 50 B8 BB 02 1E 50   ......P. ..P....P
D20:  9A 27 05 98 00 83 C4 08  B8 CE 00 B9 80 18 51 50   .'...... ......QP
D30:  8D 86 A2 FD 16 50 9A FE  25 35 04 83 C4 08 83 3E   .....P.. %5.....>
```

SAMPLE.DMP Thursday, January 6, 1994 12:01pm Page 5

```
D40:  52 0F 07 74 03 E9 16 00  B8 3C 0F 1E 50 8D 86 A2   R..t.... .<..P...
D50:  FD 16 50 9A B8 25 35 04  83 C4 08 E9 13 00 B8 54   ..P..%5. .......T
D60:  0F 1E 50 8D 86 A2 FD 16  50 9A B8 25 35 04 83 C4   ..P..... P..%5...
D70:  08 83 3E 52 0F 07 75 03  E9 77 00 C7 86 9C FC 01   ..>R..u. .w......
D80:  00 8D 86 A2 FD 16 50 8D  86 9E FC 16 50 9A FE 25   ......P. ....P..%
D90:  35 04 83 C4 08 B8 0A 00  50 8D 86 A6 FE 16 50 FF   5....... P.....P.
DA0:  B6 9C FC 9A 8E 27 35 04  83 C4 08 52 50 8D 86 9E   .....'5. ...RP...
DB0:  FC 16 50 9A B8 25 35 04  83 C4 08 B8 C6 02 1E 50   ..P..%5. .......P
DC0:  8D 86 9E FC 16 50 9A B8  25 35 04 83 C4 08 B8 00   .....P.. %5......
DD0:  00 50 8D 8E 9E FC 16 51  9A EE 32 35 04 83 C4 06   .P.....Q ..25....
DE0:  3D 00 00 7C 03 E9 03 00  E9 07 00 FF 86 9C FC E9   =..|.... ........
DF0:  8F FF 8D 86 A6 FE 16 50  8D 8E A2 FD 16 51 9A B8   .......P .....Q..
E00:  25 35 04 83 C4 08 B8 CB  02 1E 50 8D 86 A2 FD 16   %5...... ..P.....
E10:  50 9A B8 25 35 04 83 C4  08 FF 36 3A 0F FF 36 38   P..%5... ..6:..68
E20:  0F 8E 06 50 0D 26 FF 36  D2 65 26 FF 36 D0 65 8D   ...P.&.6 .e&.6.e.
E30:  86 A2 FD 16 50 9A 38 04  0D 00 83 C4 0C 8D 86 A6   ....P.8. ........
E40:  FE 16 50 B8 3C 0F 1E 50  9A B8 25 35 04 83 C4 08   ..P.<..P ..%5....
E50:  83 3E 52 0F 07 74 03 E9  35 00 A1 66 02 40 B9 06   .>R..t.. 5..f.@..
E60:  00 99 F7 F9 89 16 66 02  83 3E 66 02 00 74 03 E9   ......f. .>f..t..
E70:  1D 00 83 3E 68 02 01 74  03 E9 0D 00 C7 06 68 02   ...>h..t ......h.
E80:  00 00 FF 06 64 02 E9 06  00 C7 06 68 02 01 00 9A   ....d... ...h....
E90:  CA 00 FF 02 83 3E 52 0F  07 74 03 E9 2F 00 80 3E   .....>R. .t../..>
EA0:  54 0F 2A 74 03 E9 25 00  C7 06 68 02 00 00 C7 06   T.*t..%. ..h.....
EB0:  66 02 00 00 FF 06 64 02  B8 14 00 50 B8 01 00 50   f.....d. ...P...P
EC0:  B8 D0 02 1E 50 9A 27 05  98 00 83 C4 08 80 3E 54   ....P.'. ......>T
ED0:  0F 2E 74 03 E9 15 00 B8  14 00 50 B8 01 00 50 B8   ..t..... ..P...P.
EE0:  E6 02 1E 50 9A 27 05 98  00 83 C4 08 83 3E 52 0F   ...P.'.. .....>R.
EF0:  07 74 03 E9 6C 00 80 3E  54 0F 24 74 03 E9 62 00   .t..l..> T.$t..b.
F00:  B8 14 00 50 B8 01 00 50  B9 F6 02 1E 51 9A 27 05   ...P...P ....Q.'.
F10:  98 00 83 C4 08 B8 64 02  1E 50 B8 0F 03 1E 50 9A   ......d. .P....P.
F20:  02 0B 35 04 83 C4 08 B8  28 00 50 B8 01 00 50 B9   ..5..... (.P...P.
F30:  12 03 1E 51 9A 27 05 98  00 83 C4 08 B8 66 02 1E   ...Q.'.. .....f..
F40:  50 B9 2B 03 1E 51 9A 02  0B 35 04 83 C4 08 83 3E   P.+..Q.. .5.....>
F50:  66 02 00 7F 03 E9 04 00  FF 0E 66 02 C7 06 68 02   f....... ..f...h.
F60:  00 00 5E 5F 8B E5 5D CB  55 8B EC 81 EC 0A 01 57   ..^_..]. U......W
F70:  56 B8 01 00 50 50 B9 30  03 1E 51 9A 27 05 98 00   V...PP.0 ..Q.'...
F80:  83 C4 08 9A AD 13 F4 00  B8 01 00 50 9A 37 06 F4   ........ ...P.7..
F90:  00 83 C4 02 89 86 FA FE  83 BE FA FE 00 7D 03 E9   ........ .....}..
FA0:  0B 00 C7 86 FA FE 00 00  9A CA 00 FF 02 8B 86 FA   ........ ........
FB0:  FE E9 00 00 5E 5F 8B E5  5D CB 55 8B EC 81 EC 00   ....^_.. ].U.....
FC0:  00 57 56 B8 69 03 1E 50  9A BE 0A 35 04 83 C4 04   .WV.i..P ...5....
FD0:  B8 64 02 1E 50 B8 83 03  1E 50 9A 02 0B 35 04 83   .d..P... .P...5..
FE0:  C4 08 B8 86 03 1E 50 9A  BE 0A 35 04 83 C4 04 B8   ......P. ..5.....
FF0:  66 02 1E 50 B9 A0 03 1E  51 9A 02 0B 35 04 83 C4   f..P.... Q...5...
1000: 08 83 3E 66 02 00 7F 03  E9 04 00 FF 0E 66 02 B8   ..>f.... .....f..
1010: A3 03 1E 50 9A BE 0A 35  04 83 C4 04 B8 68 02 1E   ...P...5 .....h..
1020: 50 B9 BD 03 1E 51 9A 02  0B 35 04 83 C4 08 83 3E   P....Q.. .5.....>
1030: 68 02 00 75 03 E9 10 00  83 3E 68 02 01 75 03 E9   h..u.... .>h..u..
1040: 06 00 C7 06 68 02 00 00  5E 5F 8B E5 5D CB 55 8B   ....h... ^_..].U.
1050: EC 81 EC 02 00 57 56 9A  4C 29 35 04 3D 00 00 75   .....WV. L)5.=..u
1060: 03 E9 37 00 9A 72 29 35  04 89 46 FE 83 7E FE 00   ..7..r)5 ..F..¯..
1070: 75 03 E9 0A 00 81 7E FE  E0 00 74 03 E9 0D 00 9A   u....¯. ..t.....
1080: 72 29 35 04 89 46 FE B1  08 D3 66 FE 83 7E FE 1B   r)5..F.. ..f..¯..
1090: 74 03 E9 06 00 B8 F7 FF  E9 06 00 B8 00 00 E9 00   t....... ........
```

SAMPLE.DMP Thursday, January 6, 1994 12:01pm Page 6


```
10A0:  00 5E 5F 8B E5 5D CB 55  8B EC 81 EC 00 00 57 56   .^_..].U ......WV
10B0:  FF 76 08 FF 76 06 B8 C0  03 1E 50 9A BE 0A 35 04   .v..v... ..P...5.
10C0:  83 C4 08 5E 5F 8B E5 5D  CB 55 8B EC 81 EC 00 00   ...^_..] .U......
10D0:  57 56 5E 5F 8B E5 5D CB  55 8B EC 81 EC 00 00 57   WV^_..]. U......W
10E0:  56 5E 5F 8B E5 5D CB 55  8B EC 81 EC 32 00 57 56   V^_..].U ....2.WV
10F0:  FF 76 08 FF 76 06 B8 CE  00 B9 80 18 51 50 B8 C4   .v..v... ....QP..
1100:  03 1E 50 8D 46 CE 16 50  9A A2 2A 35 04 83 C4 10   ..P.F..P ..*5....
1110:  FF 76 08 FF 76 06 B8 CD  03 1E 50 9A BE 0A 35 04   .v..v... ..P...5.
1120:  83 C4 08 FF 36 3A 0F FF  36 38 0F 8E 06 50 0D 26   ....6:.. 68...P.&
1130:  FF 36 D2 65 26 FF 36 D0  65 8D 46 CE 16 50 9A 38   .6.e&.6. e.F..P.8
1140:  04 0D 00 83 C4 0C 5E 5F  8B E5 5D CB 55 8B EC 81   ......^_ ..].U...
1150:  EC 02 00 57 56 8E 06 54  0D 26 C7 06 D8 65 00 00   ...WV..T .&...e..
1160:  26 C7 06 DA 65 00 D0 B8  00 00 E9 00 00 5E 5F 8B   &...e... .....^_.
1170:  E5 5D CB 55 8B EC 81 EC  00 00 57 56 B8 C0 00 50   .].U.... ..WV...P
1180:  B8 05 00 50 9A 37 00 F2  02 83 C4 04 5E 5F 8B E5   ...P.7.. ....^_..
1190:  5D CB 55 8B EC 81 EC 00  00 57 56 B8 3F 00 50 B8   ].U..... .WV.?.P.
11A0:  05 00 50 9A 51 00 F2 02  83 C4 04 B8 C0 00 50 B8   ..P.Q... ......P.
11B0:  05 00 50 9A 6B 00 F2 02  83 C4 04 3D 00 00 75 03   ..P.k... ...=..u.
11C0:  E9 03 00 E9 E5 FF B8 80  00 50 B8 05 00 50 9A 37   ........ .P...P.7
11D0:  00 F2 02 83 C4 04 B8 C0  00 50 B8 05 00 50 9A 6B   ........ .P...P.k
11E0:  00 F2 02 83 C4 04 3D 00  00 75 03 E9 03 00 E9 E5   ......=. .u......
11F0:  FF 5E 5F 8B E5 5D CB 55  8B EC 81 EC 04 00 57 56   .^_..].U ......WV
1200:  B8 F5 00 50 B8 00 00 50  9A 51 00 F2 02 83 C4 04   ...P...P .Q......
1210:  C7 46 FE 00 00 E9 03 00  FF 46 FE 83 7E FE 64 7C   .F...... .F..~.d|
1220:  03 E9 2A 00 C7 46 FC 00  00 E9 03 00 FF 46 FC 83   ..*..F.. .....F..
1230:  7E FC 64 7C 03 E9 03 00  E9 F1 FF B8 00 00 50 B8   ~.d|.... ......P.
1240:  04 00 50 9A 1E 00 F2 02  83 C4 04 E9 CA FF C7 46   ..P..... .......F
1250:  FC 00 00 E9 03 00 FF 46  FC 83 7E FC 64 7C 03 E9   .......F ..~.d|..
1260:  03 00 E9 F1 FF B8 08 00  50 B8 00 00 50 9A 37 00   ........ P...P.7.
1270:  F2 02 83 C4 04 C7 46 FE  00 00 E9 03 00 FF 46 FE   ......F. ......F.
1280:  8B 46 06 39 46 FE 7C 03  E9 2A 00 C7 46 FC 00 00   .F.9F.|. .*..F...
1290:  E9 03 00 FF 46 FC 83 7E  FC 64 7C 03 E9 03 00 E9   ....F..~ .d|.....
12A0:  F1 FF B8 00 00 50 B8 04  00 50 9A 1E 00 F2 02 83   .....P.. .P......
12B0:  C4 04 E9 C8 FF C7 46 FC  00 00 E9 03 00 FF 46 FC   ......F. ......F.
12C0:  83 7E FC 64 7C 03 E9 03  00 E9 F1 FF B8 02 00 50   .~.d|... .......P
12D0:  B8 00 00 50 9A 37 00 F2  02 83 C4 04 C7 46 FC 00   ...P.7.. .....F..
12E0:  00 E9 03 00 FF 46 FC 83  7E FC 64 7C 03 E9 03 00   .....F.. ~.d|....
12F0:  E9 F1 FF 5E 5F 8B E5 5D  CB 55 8B EC 81 EC 04 00   ...^_..] .U......
1300:  57 56 B8 F3 00 50 B8 00  00 50 9A 51 00 F2 02 83   WV...P.. .P.Q....
1310:  C4 04 C7 46 FE 00 00 E9  03 00 FF 46 FE 83 7E FE   ...F.... ...F..~.
1320:  64 7C 03 E9 2A 00 C7 46  FC 00 00 E9 03 00 FF 46   d|..*..F .......F
1330:  FC 83 7E FC 64 7C 03 E9  03 00 E9 F1 FF B8 00 00   ..~.d|.. ........
1340:  50 B8 04 00 50 9A 1E 00  F2 02 83 C4 04 E9 CA FF   P...P... ........
1350:  C7 46 FC 00 00 E9 03 00  FF 46 FC 83 7E FC 64 7C   .F...... .F..~.d|
1360:  03 E9 03 00 E9 F1 FF B8  08 00 50 B8 00 00 50 9A   ........ ..P...P.
1370:  37 00 F2 02 83 C4 04 C7  46 FE 00 00 E9 03 00 FF   7....... F.......
1380:  46 FE 8B 46 06 39 46 FE  7C 03 E9 2A 00 C7 46 FC   F..F.9F. |..*..F.
1390:  00 00 E9 03 00 FF 46 FC  83 7E FC 64 7C 03 E9 03   ......F. .~.d|...
13A0:  00 E9 F1 FF B8 00 00 50  B8 04 00 50 9A 1E 00 F2   .......P ...P....
13B0:  02 83 C4 04 E9 C8 FF C7  46 FC 00 00 E9 03 00 FF   ........ F.......
13C0:  46 FC 83 7E FC 64 7C 03  E9 03 00 E9 F1 FF B8 04   F..~.d|. ........
13D0:  00 50 B8 00 00 50 9A 37  00 F2 02 83 C4 04 C7 46   .P...P.7 .......F
13E0:  FC 00 00 E9 03 00 FF 46  FC 83 7E FC 64 7C 03 E9   .......F ..~.d|..
13F0:  03 00 E9 F1 FF 5E 5F 8B  E5 5D CB 55 8B EC 81 EC   .....^_. .].U....
```

```
1400:  00 00 57 56 B8 16 00 50  B8 00 00 50 9A 1E 00 F2   ..WV...P ...P....
1410:  02 83 C4 04 B8 03 00 50  B9 01 00 51 9A 1E 00 F2   .......P ...Q....
1420:  02 83 C4 04 B8 00 00 50  B9 02 00 51 9A 1E 00 F2   .......P ...Q....
1430:  02 83 C4 04 B8 00 00 50  B9 03 00 51 9A 1E 00 F2   .......P ...Q....
1440:  02 83 C4 04 B8 02 00 50  B8 05 00 50 9A 1E 00 F2   .......P ...P....
1450:  02 83 C4 04 B8 00 00 50  B9 06 00 51 9A 1E 00 F2   .......P ...Q....
1460:  02 83 C4 04 B8 00 00 50  B9 07 00 51 9A 1E 00 F2   .......P ...Q....
1470:  02 83 C4 04 B8 40 00 50  B8 08 00 50 9A 1E 00 F2   .....@.P ...P....
1480:  02 83 C4 04 B8 00 00 50  B9 09 00 51 9A 1E 00 F2   .......P ...Q....
1490:  02 83 C4 04 B8 00 00 50  B8 0A 00 50 9A 1E 00 F2   .......P ...P....
14A0:  02 83 C4 04 5E 5F 8B E5  5D CB 55 8B EC 81 EC 00   ....^_.. ].U.....
14B0:  00 57 56 BE 00 00 E9 01  00 46 81 FE 00 01 7C 03   .WV..... .F....|.
14C0:  E9 13 00 56 56 FF 76 08  FF 76 06 9A 86 00 F2 02   ...VV.v. .v......
14D0:  83 C4 08 E9 E3 FF 5E 5F  8B E5 5D CB 55 8B EC 81   ......^_ ..].U...
14E0:  EC 00 00 57 56 BE 00 00  E9 01 00 46 81 FE 00 01   ...WV... ...F....
14F0:  7C 03 E9 18 00 B8 FF 00  2B C6 50 56 FF 76 08 FF   |....... +.PV.v..
1500:  76 06 9A 86 00 F2 02 83  C4 08 E9 DE FF 5E 5F 8B   v....... .....^_.
1510:  E5 5D CB 55 8B EC 81 EC  00 00 57 56 9A 0C 00 F4   .].U.... ..WV....
1520:  00 3D 00 00 7C 03 E9 06  00 B8 FF FF E9 42 00 9A   .=..|... .....B..
1530:  C7 04 F4 00 3D 00 00 75  03 E9 09 00 C7 06 1E 04   ....=..u ........
1540:  01 00 E9 18 00 9A 6C 09  4A 02 9A 34 05 4A 02 3D   ......l. J..4.J.=
1550:  00 00 75 03 E9 06 00 C7  06 1E 04 02 00 83 3E 1E   ..u..... ......>.
1560:  04 01 74 03 E9 05 00 9A  37 04 F4 00 9A 0C 06 F4   ..t..... 7.......
1570:  00 5E 5F 8B E5 5D CB 55  8B EC 81 EC 00 00 57 56   .^_..].U ......WV
1580:  9A BB 02 F4 00 B8 00 00  50 50 9A 6A 03 F4 00 83   ........ PP.j....
1590:  C4 04 B8 00 00 50 B9 01  00 51 9A 6A 03 F4 00 83   .....P.. .Q.j....
15A0:  C4 04 B8 00 00 50 B9 02  00 51 9A 6A 03 F4 00 83   .....P.. .Q.j....
15B0:  C4 04 8E 06 56 0D 26 83  3E DC 65 05 74 03 E9 13   ....V.&. >.e.t...
15C0:  00 B8 00 00 50 B8 03 00  50 9A 6A 03 F4 00 83 C4   ....P... P.j.....
15D0:  04 E9 10 00 B8 00 00 50  B8 03 00 50 9A 9C 03 F4   .......P ...P....
15E0:  00 83 C4 04 FF 36 1C 04  9A B7 00 F4 00 83 C4 02   .....6.. ........
15F0:  FF 36 1A 04 9A B9 01 F4  00 83 C4 02 9A 52 00 F4   .6...... .....R..
1600:  00 5E 5F 8B E5 5D CB 55  8B EC 81 EC 02 00 57 56   .^_..].U ......WV
1610:  C7 46 FE FF 00 B8 00 00  50 50 9A 1E 00 F2 02 83   .F...... PP......
1620:  C4 04 B8 00 00 50 9A 06  00 F2 02 83 C4 02 89 46   .....P.. .......F
1630:  FE 83 7E FE 00 75 03 E9  06 00 B8 00 00 E9 34 00   ..~..u.. ......4.
1640:  B8 16 00 50 B8 00 00 50  9A 1E 00 F2 02 83 C4 04   ...P...P ........
1650:  B8 00 00 50 9A 06 00 F2  02 83 C4 02 89 46 FE 83   ...P.... .....F..
1660:  7E FE 16 75 03 E9 06 00  B8 00 00 E9 06 00 B8 01   ~..u.... ........
1670:  00 E9 00 00 5E 5F 8B E5  5D CB 55 8B EC 81 EC 02   ....^_.. ].U.....
1680:  00 57 56 C7 46 FE 01 00  8B 46 FE E9 00 00 5E 5F   .WV.F... .F....^_
1690:  8B E5 5D CB 55 8B EC 81  EC 06 00 57 56 8B 46 0A   ..].U... ...WV.F.
16A0:  89 46 FA 8B 46 08 25 80  01 D1 F8 D1 F8 89 46 FE   .F..F.%. ......F.
16B0:  FF 36 20 04 9A 18 2C 35  04 83 C4 02 89 46 FC 8A   .6 ...,5 .....F..
16C0:  46 FC 25 9F 00 0B 46 FE  89 46 FC FF 76 FC FF 36   F.%...F. .F..v..6
16D0:  20 04 9A 26 2C 35 04 83  C4 04 8A 66 08 D0 E4 2A    ..&,5.. ...f...*
16E0:  C0 03 46 06 89 46 FC FF  76 0A 8E 06 54 0D 26 A1   ..F..F.. v...T.&.
16F0:  D8 65 26 8B 16 DA 65 03  46 FC 52 50 FF 76 0E FF   .e&...e. F.RP.v..
1700:  76 0C 9A BA 31 35 04 83  C4 0A 5E 5F 8B E5 5D CB   v...15.. ..^_..].
1710:  55 8B EC 81 EC 00 00 57  56 8B 46 06 A3 1A 04 8B   U......W V.F.....
1720:  46 08 A3 1C 04 5E 5F 8B  E5 5D CB 55 8B EC 81 EC   F....^_. .].U....
1730:  00 00 57 56 A1 1A 04 C4  5E 06 26 89 07 A1 1C 04   ..WV.... ^.&.....
1740:  C4 5E 0A 26 89 07 5E 5F  8B E5 5D CB 55 8B EC 81   .^.&..^_ ..].U...
1750:  EC 02 00 57 56 B8 E6 03  1E 50 8D 46 FE 16 50 16   ...WV... .P.F..P.
```

SAMPLE.DMP Thursday, January 6, 1994 12:01pm Page 8

```
1760:  50 16 50 16 50 16 50 16  50 9A E0 05 0D 00 83 C4   P.P.P.P. P.......
1770:  1C 5E 5F 8B E5 5D CB 55  8B EC 81 EC 46 02 57 56   .^_..].U ....F.WV
1780:  9A D6 14 F4 00 3D 00 00  74 03 E9 06 00 B8 F5 FF   .....=.. t.......
1790:  E9 33 05 8E 06 58 0D 26  A1 C6 00 8E 06 5A 0D 26   .3...X.& .....Z.&
17A0:  2B 06 C8 00 89 46 EE 8E  06 5C 0D 26 A1 CA 00 8E   +....F.. .\.&....
17B0:  06 5E 0D 26 2B 06 CC 00  89 86 D6 FD 8B 46 EE D1   .^.&+... .....F..
17C0:  E0 89 46 F4 89 46 F8 89  46 FE 8B 86 D6 FD B9 05   ..F..F.. F.......
17D0:  00 99 F7 F9 26 03 06 CC  00 89 86 DA FD 8B 86 D6   ....&... ........
17E0:  FD 99 2B C2 D1 F8 26 03  06 CC 00 89 86 D0 FD 8B   ..+...&. ........
17F0:  86 D6 FD 99 F7 F9 8E 06  5C 0D 26 2B 06 CA 00 F7   ........ \.&+....
1800:  D8 89 86 C6 FD B8 FF 00  89 86 CC FD 89 86 D4 FD   ........ ........
1810:  89 86 DE FD C7 06 60 10  98 3A C7 06 62 10 00 00   ......`. .:..b...
1820:  C7 06 64 10 E8 03 C7 06  66 10 00 00 9A 8E 30 35   ..d..... f.....05
1830:  04 A3 68 10 89 16 6A 10  8D 46 EA 16 50 8D 8E C4   ..h...j. .F..P...
1840:  FD 16 51 9A 8C 0B F4 00  83 C4 08 3D 00 00 75 03   ..Q..... ...=..u.
1850:  E9 1E 00 8B 86 C4 FD D1  E0 B9 03 00 99 F7 F9 89   ........ ........
1860:  46 EC 8B 46 EA D1 E0 99  F7 F9 89 86 C2 FD E9 13   F..F.... ........
1870:  00 8B 46 EE B9 03 00 99  F7 F9 89 46 EC A1 E6 03   ..F..... ...F....
1880:  89 86 C2 FD 8B 46 EC B9  05 00 99 F7 F9 89 46 F0   .....F.. ......F.
1890:  8B 86 C2 FD 99 2B C2 D1  F8 3D 01 00 7C 03 E9 03   .....+.. .=..|...
18A0:  00 B8 01 00 89 86 C8 FD  C7 86 C0 FD 00 00 83 7E   ........ .......~
18B0:  06 00 75 03 E9 5D 03 2B  C0 50 50 9A 78 2D 35 04   ..u..].+ .PP.x-5.
18C0:  83 C4 04 89 86 BC FD 89  96 BE FD 9A AD 13 F4 00   ........ ........
18D0:  9A D3 13 F4 00 8D 86 E0  FD 16 50 FF 76 EE FF B6   ........ ..P.v...
18E0:  DA FD 8E 06 5A 0D 26 FF  36 C8 00 9A 57 14 F4 00   ....Z.&. 6...W...
18F0:  83 C4 0A 3D 00 00 75 03  E9 06 00 B8 F6 FF E9 C5   ...=..u. ........
1900:  03 8D 86 DC FD 16 50 8D  46 FC 16 50 FF 76 EE 8D   ......P. F..P.v..
1910:  86 E0 FD 16 50 9A A1 0B  F4 00 83 C4 0E 8D 86 E0   ....P... ........
1920:  FD 16 50 FF 76 EE FF B6  D0 FD 8E 06 5A 0D 26 FF   ..P.v... ....Z.&.
1930:  36 C8 00 9A 57 14 F4 00  83 C4 0A 3D 00 00 75 03   6...W... ...=..u.
1940:  E9 06 00 B8 F6 FF E9 7D  03 8D 86 D2 FD 16 50 8D   .......} ......P.
1950:  46 F6 16 50 FF 76 EE 8D  86 E0 FD 16 50 9A A1 0B   F..P.v.. ....P...
1960:  F4 00 83 C4 0E 8D 86 E0  FD 16 50 FF 76 EE FF B6   ........ ..P.v...
1970:  C6 FD 8E 06 5A 0D 26 FF  36 C8 00 9A 57 14 F4 00   ....Z.&. 6...W...
1980:  83 C4 0A 3D 00 00 75 03  E9 06 00 B8 F6 FF E9 35   ...=..u. .......5
1990:  03 8D 86 CA FD 16 50 8D  46 F2 16 50 FF 76 EE 8D   ......P. F..P.v..
19A0:  86 E0 FD 16 50 9A A1 0B  F4 00 83 C4 0E 8B 86 C0   ....P... ........
19B0:  FD 89 46 E6 8B 46 FC 39  46 EC 7E 03 E9 0D 00 8B   ..F..F.9 F.~.....
19C0:  86 DC FD 39 86 C2 FD 7F  03 E9 30 00 8B 46 F6 39   ...9.... ..0..F.9
19D0:  46 EC 7E 03 E9 0D 00 8B  86 D2 FD 39 86 C2 FD 7F   F.~..... ...9....
19E0:  03 E9 18 00 8B 46 F2 39  46 EC 7E 03 E9 16 00 8B   .....F.9 F.~.....
19F0:  86 CA FD 39 86 C2 FD 7E  03 E9 09 00 C7 86 C0 FD   ...9...~ ........
1A00:  01 00 E9 06 00 C7 86 C0  FD 00 00 83 7E E6 00 74   ........ ....~..t
1A10:  03 E9 16 00 83 BE C0 FD  00 75 03 E9 0C 00 9A 8E   ........ .u......
1A20:  30 35 04 A3 6C 10 89 16  6E 10 8B 46 FC 2B 46 FE   05..l... n..F.+F.
1A30:  50 9A C4 32 35 04 83 C4  02 3B 46 F0 7C 03 E9 84   P..25... .;F.|...
1A40:  00 8B 46 F6 2B 46 F8 50  9A C4 32 35 04 83 C4 02   ..F.+F.P ..25....
1A50:  3B 46 F0 7C 03 E9 6D 00  8B 46 F2 2B 46 F4 50 9A   ;F.|..m. .F.+F.P.
1A60:  C4 32 35 04 83 C4 02 3B  46 F0 7C 03 E9 56 00 8B   .25....; F.|..V..
1A70:  86 DC FD 2B 86 DE FD 50  9A C4 32 35 04 83 C4 02   ...+...P ..25....
1A80:  3B 86 C8 FD 7C 03 E9 3C  00 8B 86 D2 FD 2B 86 D4   ;...|..< .....+..
1A90:  FD 50 9A C4 32 35 04 83  C4 02 3B 86 C8 FD 7C 03   .P..25.. ..;...|.
1AA0:  E9 22 00 8B 86 CA FD 2B  86 CC FD 50 9A C4 32 35   .".....+ ...P..25
1AB0:  04 83 C4 02 3B 86 C8 FD  7C 03 E9 08 00 C7 46 E8   ....;... |.....F.
```

```
1AC0:  01 00 E9 05 00 C7 46 E8  00 00 9A 8E 30 35 04 2B   ......F. ....05.+
1AD0:  06 68 10 1B 16 6A 10 A3  58 10 89 16 5A 10 9A 8E   .h...j.. X...Z...
1AE0:  30 35 04 2B 06 6C 10 1B  16 6E 10 A3 5C 10 89 16   05.+.l.. .n..\...
1AF0:  5E 10 9A CE 04 98 00 3D  F7 FF 74 03 E9 06 00 B8   ^......= ..t.....
1B00:  F7 FF E9 C1 01 83 BE C0  FD 00 75 03 E9 B4 00 8B   ........ ..u.....
1B10:  46 F2 3B 46 F6 7F 03 E9  03 00 8B 46 F6 99 2B C2   F.;F.... ...F..+.
1B20:  D1 F8 3B 46 FC 7F 03 E9  09 00 C7 86 BA FD 02 00   ..;F.... ........
1B30:  E9 62 00 8B 46 F6 3B 46  FC 7F 03 E9 03 00 8B 46   .b..F.;F .......F
1B40:  FC 99 2B C2 D1 F8 3B 46  F2 7F 03 E9 09 00 C7 86   ..+...;F ........
1B50:  BA FD 03 00 E9 3E 00 8B  86 CA FD 03 86 D2 FD 03   .....>.. ........
1B60:  86 DC FD 8B 8E C2 FD 8B  D1 D1 E1 03 CA 3B C1 7E   ........ .....;.~
1B70:  03 E9 09 00 C7 86 BA FD  04 00 E9 18 00 83 7E E8   ........ ......~.
1B80:  00 74 03 E9 09 00 C7 86  BA FD 05 00 E9 06 00 C7   .t...... ........
1B90:  86 BA FD 00 00 83 BE BA  FD 00 75 03 E9 1E 00 A1   ........ ..u.....
1BA0:  5C 10 8B 16 5E 10 39 16  66 10 7E 03 E9 11 00 7D   \...^.9. f.~....}
1BB0:  03 E9 09 00 39 06 64 10  72 03 E9 03 00 E9 54 00   ....9.d. r.....T.
1BC0:  E9 24 00 A1 58 10 8B 16  5A 10 39 16 62 10 7E 03   .$..X... Z.9.b.~.
1BD0:  E9 14 00 7D 03 E9 09 00  39 06 60 10 72 03 E9 06   ...}.... 9.`.r...
1BE0:  00 B8 F4 FF E9 DF 00 8B  46 FC 89 46 FE 8B 46 F6   ........ F..F..F.
1BF0:  89 46 F8 8B 46 F2 89 46  F4 8B 86 DC FD 89 86 DE   .F..F..F ........
1C00:  FD 8B 86 D2 FD 89 86 D4  FD 8B 86 CA FD 89 86 CC   ........ ........
1C10:  FD E9 B7 FC 8E 06 5E 0D  26 A1 CC 00 89 86 D8 FD   ......^. &.......
1C20:  2B C0 89 46 E4 89 46 E2  E9 04 00 FF 86 D8 FD 8E   +..F..F. ........
1C30:  06 5C 0D 8B 86 D8 FD 26  39 06 CA 00 7F 03 E9 7E   .\.....& 9......~
1C40:  00 8D 86 E0 FD 16 50 FF  76 EE FF B6 D8 FD 8E 06   ......P. v.......
1C50:  5A 0D 26 FF 36 C8 00 9A  57 14 F4 00 83 C4 0A 3D   Z.&.6... W......=
1C60:  00 00 75 03 E9 06 00 B8  F6 FF E9 59 00 C7 86 CE   ..u..... ...Y....
1C70:  FD 00 00 E9 04 00 FF 86  CE FD 8B 46 EE 39 86 CE   ........ ...F.9..
1C80:  FD 7C 03 E9 36 00 8B 46  E2 8B 56 E4 8E 06 60 0D   .|..6..F ..V...`.
1C90:  26 03 06 D0 65 83 D2 00  B9 0C 00 D3 E2 26 03 16   &...e... .....&..
1CA0:  D2 65 8E C2 8B D8 8B B6  CE FD 8A 82 E0 FD 26 88   .e...... ......&.
1CB0:  07 83 46 E2 01 83 56 E4  00 E9 BA FF E9 6C FF 8B   ..F...V. .....l..
1CC0:  86 BA FD E9 00 00 5E 5F  8B E5 5D CB 55 8B EC 81   ......^_ ..].U...
1CD0:  EC 00 00 57 56 B8 00 00  E9 00 00 5E 5F 8B E5 5D   ...WV... ...^_..]
1CE0:  CB 55 8B EC 81 EC 08 00  57 56 FF 76 0A B8 00 00   .U...... WV.v....
1CF0:  50 B9 70 10 1E 51 9A 18  32 35 04 83 C4 08 B8 C8   P.p..Q.. 25......
1D00:  00 50 B8 00 00 50 B9 76  12 1E 51 9A 18 32 35 04   .P...P.v ..Q..25.
1D10:  83 C4 08 B8 00 00 89 46  FE 89 46 FC E9 03 00 FF   .......F ..F.....
1D20:  46 FC 83 7E FC 19 7C 03  E9 11 00 C4 5E 06 8B 76   F..~..|. ....^..v
1D30:  FC 26 8A 00 2A E4 01 46  FE E9 E3 FF C7 06 74 12   .&..*..F ......t.
1D40:  00 00 C7 46 FC 0C 00 C7  46 FA 00 00 C7 46 F8 19   ...F.... F....F..
1D50:  00 E9 09 00 FF 46 FC FF  46 FA FF 46 F8 8B 46 0A   .....F.. F..F..F.
1D60:  39 46 F8 7E 03 E9 62 00  8B 46 FE B9 19 00 99 F7   9F.~..b. .F......
1D70:  F9 C4 5E 06 8B 76 FC 26  8A 08 2A ED 2B C8 51 9A   ..^..v.& ..*.+.Q.
1D80:  C4 32 35 04 83 C4 02 A3  72 12 A0 72 12 8B 5E FC   .25..... r..r..^.
1D90:  88 87 70 10 83 3E 72 12  64 7C 03 E9 0E 00 8B 1E   ..p..>r. d|......
1DA0:  72 12 D1 E3 FF 87 76 12  FF 06 74 12 C4 5E 06 8B   r.....v. ..t..^..
1DB0:  76 F8 26 8A 00 2A E4 C4  5E 06 8B 76 FA 26 8A 08   v.&..*.. ^..v.&..
1DC0:  2A ED 2B C1 01 46 FE E9  8A FF B9 08 00 A1 74 12   *.+..F.. ......t.
1DD0:  99 F7 F9 A3 74 12 C7 06  72 12 00 00 E9 04 00 FF   ....t... r.......
1DE0:  06 72 12 83 3E 74 12 00  7F 03 E9 11 00 8B 1E 72   .r..>t.. .......r
1DF0:  12 D1 E3 8B 87 76 12 29  06 74 12 E9 E1 FF A1 72   .....v.) .t.....r
1E00:  12 A3 70 12 8B 46 0A 2D  18 00 99 33 C2 2B C2 B9   ..p..F.- ...3.+..
1E10:  03 00 D3 F8 33 C2 2B C2  A3 40 13 C7 46 F8 00 00   ....3.+. .@..F...
```

SAMPLE.DMP Thursday, January 6, 1994 12:01pm Page 10


```
1E20:  E9 03 00 FF 46 F8 A1 40  13 39 46 F8 7C 03 E9 56   ....F..@ .9F.|..V
1E30:  00 C7 46 FE 00 00 B1 03  8B 46 F8 D3 E0 05 0C 00   ..F..... .F......
1E40:  89 46 FC E9 03 00 FF 46  FC B1 03 8B 46 F8 D3 E0   .F.....F ....F...
1E50:  05 14 00 3B 46 FC 7F 03  E9 0F 00 8B 5E FC 8A 87   ...;F... ....^...
1E60:  70 10 2A E4 01 46 FE E9  DC FF 8B 46 FE 99 33 C2   p.*..F.. ...F..3.
1E70:  2B C2 B9 03 00 D3 F8 33  C2 2B C2 8B 5E F8 D1 E3   +......3 .+..^...
1E80:  89 87 44 13 E9 9C FF C7  06 3E 13 00 00 E9 04 00   ..D..... .>......
1E90:  FF 06 3E 13 A1 3E 13 39  06 40 13 7F 03 E9 4E 00   ..>..>.9 .@....N.
1EA0:  8B 1E 3E 13 D1 E3 A1 70  12 39 87 44 13 7F 03 E9   ..>....p .9.D....
1EB0:  39 00 8B 1E 3E 13 D1 E3  A1 70 12 39 87 46 13 7F   9...>... .p.9.F..
1EC0:  03 E9 27 00 8B 1E 3E 13  D1 E3 A1 70 12 39 87 48   ..'...>. ...p.9.H
1ED0:  13 7F 03 E9 15 00 8B 1E  3E 13 D1 E3 A1 70 12 39   ........ >....p.9
1EE0:  87 4A 13 7F 03 E9 03 00  E9 03 00 E9 A2 FF A1 40   .J...... .......@
1EF0:  13 48 A3 42 13 E9 04 00  FF 0E 42 13 83 3E 42 13   .H.B.... ..B..>B.
1F00:  00 7F 03 E9 4E 00 8B 1E  42 13 D1 E3 A1 70 12 39   ....N... B....p.9
1F10:  87 44 13 7F 03 E9 39 00  8B 1E 42 13 D1 E3 A1 70   .D....9. ..B....p
1F20:  12 39 87 42 13 7F 03 E9  27 00 8B 1E 42 13 D1 E3   .9.B.... '...B...
1F30:  A1 70 12 39 87 40 13 7F  03 E9 15 00 8B 1E 42 13   .p.9.@.. ......B.
1F40:  D1 E3 A1 70 12 39 87 3E  13 7F 03 E9 03 00 E9 03   ...p.9.> ........
1F50:  00 E9 A4 FF A1 3E 13 39  06 42 13 7E 03 E9 13 00   .....>.9 .B.~....
1F60:  C4 5E 0C 26 C7 07 00 00  C4 5E 10 26 C7 07 00 00   .^.&.... .^.&....
1F70:  E9 50 00 B1 03 A1 42 13  2B 06 3E 13 D3 E0 C4 5E   .P....B. +.>....^
1F80:  0C 26 89 07 C7 46 FE 00  00 A1 3E 13 89 46 FC E9   .&...F.. ..>..F..
1F90:  03 00 FF 46 FC A1 42 13  39 46 FC 7E 03 E9 0F 00   ...F..B. 9F.~....
1FA0:  8B 5E FC D1 E3 8B 87 44  13 01 46 FE E9 E3 FF 8B   .^.....D ..F.....
1FB0:  46 FE 8B 0E 42 13 2B 0E  3E 13 99 F7 F9 C4 5E 10   F...B.+. >.....^.
1FC0:  26 89 07 5E 5F 8B E5 5D  CB 55 8B EC 81 EC 36 02   &..^_..] .U....6.
1FD0:  57 56 9A D6 14 F4 00 3D  00 00 74 03 E9 06 00 B8   WV.....= ..t.....
1FE0:  F5 FF E9 4D 04 B8 00 02  89 46 FE 89 86 CA FD 89   ...M.... .F......
1FF0:  86 D8 FD B8 00 00 89 46  F4 89 46 FC 9A AD 13 F4   .......F ..F.....
2000:  00 9A D3 13 F4 00 83 7E  06 01 74 03 E9 49 03 2B   .......~ ..t..I.+
2010:  C0 50 50 9A 78 2D 35 04  83 C4 04 89 86 D4 FD 89   .PP.x-5. ........
2020:  96 D6 FD 8E 06 58 0D 26  A1 C6 00 8E 06 5A 0D 26   .....X.& .....Z.&
2030:  2B 06 C8 00 89 86 DC FD  A1 24 04 39 46 FC 7C 03   +....... .$.9F.|.
2040:  E9 10 03 C7 46 F2 00 00  2B C0 50 50 9A 78 2D 35   ....F... +.PP.x-5
2050:  04 83 C4 04 89 86 CE FD  89 96 D0 FD FF B6 D6 FD   ........ ........
2060:  FF B6 D4 FD FF B6 D0 FD  FF B6 CE FD 9A 34 2C 35   ........ .....4,5
2070:  04 83 C4 08 8E C2 8B D8  CD 3C DD 07 9A 02 4B 35   ........ .<....K5
2080:  04 89 46 EA 83 7E EA 0F  7F 03 E9 06 00 B8 F4 FF   ..F..~.. ........
2090:  E9 9F 03 A1 26 04 39 46  F2 7D 03 E9 1E 00 83 7E   ....&.9F .}.....~
20A0:  F4 01 74 03 E9 15 00 83  7E FA 00 74 03 E9 0C 00   ..t..... ~..t....
20B0:  83 7E F0 00 75 03 E9 03  00 E9 6F 02 9A AD 13 F4   .~..u... ..o.....
20C0:  00 9A D3 13 F4 00 C7 86  DA FD 00 00 C7 86 D2 FD   ........ ........
20D0:  00 00 C7 86 CC FD 00 00  8D 86 E8 FD 16 50 FF B6   ........ .....P..
20E0:  DC FD B9 50 00 51 8E 06  5A 0D 26 FF 36 C8 00 9A   ...P.Q.. Z.&.6...
20F0:  57 14 F4 00 83 C4 0A FF  B6 DC FD 8D 86 E8 FD 16   W....... ........
2100:  50 9A 02 15 F4 00 83 C4  06 89 46 E8 C7 86 E2 FD   P....... ..F.....
2110:  00 00 E9 04 00 FF 86 E2  FD 8B 86 DC FD 39 86 E2   ........ .....9..
2120:  FD 7C 03 E9 26 00 8B B6  E2 FD 8A 82 E8 FD 2A E4   .|..&... ......*.
2130:  2B 46 E8 50 9A C4 32 35  04 83 C4 02 3B 06 E6 03   +F.P..25 ....;...
2140:  77 03 E9 04 00 FF 86 DA  FD E9 C9 FF 8D 86 E8 FD   w....... ........
2150:  16 50 FF B6 DC FD B9 96  00 51 8E 06 5A 0D 26 FF   .P...... .Q..Z.&.
2160:  36 C8 00 9A 57 14 F4 00  83 C4 0A FF B6 DC FD 8D   6...W... ........
2170:  86 E8 FD 16 50 9A 02 15  F4 00 83 C4 06 89 86 E6   ....P... ........
```

```
2180:  FD C7 86 E2 FD 00 00 E9  04 00 FF 86 E2 FD 8B 86   ........ ........
2190:  DC FD 39 86 E2 FD 7C 03  E9 27 00 8B B6 E2 FD 8A   ..9...|. .'......
21A0:  82 E8 FD 2A E4 2B 86 E6  FD 50 9A C4 32 35 04 83   ...*.+.. .P..25..
21B0:  C4 02 3B 06 E6 03 77 03  E9 04 00 FF 86 D2 FD E9   ..;...w. ........
21C0:  C8 FF 8D 86 E8 FD 16 50  FF B6 DC FD B9 0E 01 51   .......P .......Q
21D0:  8E 06 5A 0D 26 FF 36 C8  00 9A 57 14 F4 00 83 C4   ..Z.&.6. ..W.....
21E0:  0A FF B6 DC FD 8D 86 E8  FD 16 50 9A 02 15 F4 00   ........ ..P.....
21F0:  83 C4 06 89 86 E0 FD C7  86 E2 FD 00 00 E9 04 00   ........ ........
2200:  FF 86 E2 FD 8B 86 DC FD  39 86 E2 FD 7C 03 E9 27   ........ 9...|..'
2210:  00 8B B6 E2 FD 8A 82 E8  FD 2A E4 2B 86 E0 FD 50   ........ .*.+...P
2220:  9A C4 32 35 04 83 C4 02  3B 06 E6 03 77 03 E9 04   ..25.... ;...w...
2230:  00 FF 86 CC FD E9 C8 FF  83 BE DA FD 78 72 03 E9   ........ ....xr..
2240:  1D 00 81 BE D2 FD B4 00  72 03 E9 12 00 83 BE CC   ........ r.......
2250:  FD 78 72 03 E9 08 00 C7  46 FA 01 00 E9 05 00 C7   .xr..... F.......
2260:  46 FA 00 00 83 BE DA FD  78 73 03 E9 15 00 81 BE   F....... xs......
2270:  D2 FD B4 00 73 03 E9 0A  00 83 BE CC FD 78 72 03   ....s... .....xr.
2280:  E9 08 00 C7 46 F6 01 00  E9 05 00 C7 46 F6 00 00   ....F... ....F...
2290:  8B 86 DA FD 2B 86 D8 FD  50 9A C4 32 35 04 83 C4   ....+... P..25...
22A0:  02 3B 06 28 04 7C 03 E9  3B 00 8B 86 D2 FD 2B 86   .;.(.|.. ;.....+.
22B0:  CA FD 50 9A C4 32 35 04  83 C4 02 3B 06 28 04 7C   ..P..25. ...;.(.|
22C0:  03 E9 21 00 8B 86 CC FD  2B 46 FE 50 9A C4 32 35   ..!..... +F.P..25
22D0:  04 83 C4 02 3B 06 28 04  7C 03 E9 08 00 C7 46 F0   ....;.(. |.....F.
22E0:  01 00 E9 05 00 C7 46 F0  00 00 83 7E F4 00 74 03   ......F. ...~..t.
22F0:  E9 06 00 8B 46 FA 89 46  F8 83 7E F4 01 74 03 E9   ....F..F ..~..t..
2300:  06 00 8B 46 F6 89 46 F8  8B 86 DA FD 89 86 D8 FD   ...F..F. ........
2310:  8B 86 D2 FD 89 86 CA FD  8B 86 CC FD 89 46 FE FF   ........ .....F..
2320:  46 F2 83 7E F8 00 74 03  E9 1D FD 83 7E F4 00 74   F..~..t. ....~..t
2330:  03 E9 19 00 C7 46 F4 01  00 2B C0 50 50 9A 78 2D   .....F.. .+.PP.x-
2340:  35 04 83 C4 04 89 86 D4  FD 89 96 D6 FD FF 46 FC   5....... ......F.
2350:  E9 E5 FC 9A CA 00 FF 02  C7 46 F4 00 00 C7 46 FC   ........ .F....F.
2360:  00 00 8E 06 5E 0D 26 A1  CC 00 89 86 E2 FD 2B C0   ....^.&. ......+.
2370:  89 46 EE 89 46 EC E9 04  00 FF 86 E2 FD 8E 06 5C   .F..F... .......\
2380:  0D 8B 86 E2 FD 26 39 06  CA 00 7F 03 E9 9D 00 8D   .....&9. ........
2390:  86 E8 FD 16 50 8E 06 58  0D 26 A1 C6 00 8E 06 5A   ....P..X .&.....Z
23A0:  0D 26 2B 06 C8 00 50 FF  B6 E2 FD 26 FF 36 C8 00   .&+...P. ...&.6..
23B0:  9A 57 14 F4 00 83 C4 0A  89 86 E4 FD 83 BE E4 FD   .W...... ........
23C0:  00 75 03 E9 06 00 B8 F6  FF E9 66 00 C7 86 DE FD   .u...... ..f.....
23D0:  00 00 E9 04 00 FF 86 DE  FD 8E 06 58 0D 26 A1 C6   ........ ...X.&..
23E0:  00 8E 06 5A 0D 26 2B 06  C8 00 3B 86 DE FD 7F 03   ...Z.&+. ..;.....
23F0:  E9 36 00 8B 46 EC 8B 56  EE 8E 06 60 0D 26 03 06   .6..F..V ...`.&..
2400:  D0 65 83 D2 00 B9 0C 00  D3 E2 26 03 16 D2 65 8E   .e...... ..&...e.
2410:  C2 8B D8 8B B6 DE FD 8A  82 E8 FD 26 88 07 83 46   ........ ...&...F
2420:  EC 01 83 56 EE 00 E9 AC  FF E9 4D FF B8 00 00 E9   ...V.... ..M.....
2430:  00 00 5E 5F 8B E5 5D CB  55 8B EC 81 EC 04 00 57   ..^_..]. U......W
2440:  56 B8 2A 04 1E 50 B8 E8  03 1E 50 9A 38 07 35 04   V.*..P.. ..P.8.5.
2450:  83 C4 08 89 46 FC 89 56  FE FF 76 08 FF 76 06 B8   ....F..V ..v..v..
2460:  2D 04 1E 50 FF 76 FE FF  76 FC 9A 54 07 35 04 83   -..P.v.. v..T.5..
2470:  C4 0C FF 76 FE FF 76 FC  9A 3E 06 35 04 83 C4 04   ...v..v. .>.5....
2480:  5E 5F 8B E5 5D CB 55 8B  EC 81 EC 08 00 57 56 B8   ^_..].U. .....WV.
2490:  35 04 1E 50 B8 E8 03 1E  50 9A 38 07 35 04 83 C4   5..P.... P.8.5...
24A0:  08 89 46 FC 89 56 FE 0B  D0 75 03 E9 39 00 8D 46   ..F..V.. .u..9..F
24B0:  F8 16 50 8D 4E FA 16 51  BA 38 04 1E 52 FF 76 FE   ..P.N..Q .8..R.v.
24C0:  FF 76 FC 9A 06 09 35 04  83 C4 10 FF 76 FE FF 76   .v....5. ....v..v
24D0:  FC 9A 3E 06 35 04 83 C4  04 FF 76 F8 FF 76 FA 9A   ..>.5... ..v..v..
```

```
24E0:  D0 05 F4 00 83 C4 04 5E  5F 8B E5 5D CB 55 8B EC   .......^ _..].U..
24F0:  81 EC 00 00 57 56 83 3E  1E 04 01 74 03 E9 08 00   ....WV.> ...t....
2500:  9A 33 00 F4 00 E9 05 00  9A 1E 03 4A 02 5E 5F 8B   .3...... ...J.^_.
2510:  E5 5D CB 55 8B EC 81 EC  00 00 57 56 83 3E 1E 04   .].U.... ..WV.>..
2520:  01 74 03 E9 08 00 9A 52  00 F4 00 E9 05 00 9A 53   .t.....R .......S
2530:  09 4A 02 5E 5F 8B E5 5D  CB 55 8B EC 81 EC 00 00   .J.^_..] .U......
2540:  57 56 83 3E 1E 04 01 74  03 E9 11 00 FF 76 08 FF   WV.>...t .....v..
2550:  76 06 9A 6A 03 F4 00 83  C4 04 E9 05 00 9A 2F 02   v..j.... ....../.
2560:  4A 02 5E 5F 8B E5 5D CB  55 8B EC 81 EC 00 00 57   J.^_..]. U......W
2570:  56 83 3E 1E 04 01 74 03  E9 11 00 FF 76 08 FF 76   V.>...t. ....v..v
2580:  06 9A 9C 03 F4 00 83 C4  04 E9 05 00 9A A4 02 4A   ........ .......J
2590:  02 5E 5F 8B E5 5D CB 55  8B EC 81 EC 00 00 57 56   .^_..].U ......WV
25A0:  83 3E 1E 04 01 74 03 E9  1A 00 FF 76 0E FF 76 0C   .>...t.. ...v..v.
25B0:  FF 76 0A FF 76 08 FF 76  06 9A 54 05 F4 00 83 C4   .v..v..v ..T.....
25C0:  0A E9 1A 00 FF 76 0E FF  76 0C FF 76 0A FF 76 08   .....v.. v..v..v.
25D0:  FF 76 06 9A B2 09 4A 02  83 C4 0A E9 06 00 B8 00   .v....J. ........
25E0:  00 E9 00 00 5E 5F 8B E5  5D CB 55 8B EC 81 EC 00   ....^_.. ].U.....
25F0:  00 57 56 83 3E 1E 04 01  74 03 E9 0B 00 9A C7 04   .WV.>... t.......
2600:  F4 00 E9 0B 00 E9 08 00  9A 34 05 4A 02 E9 00 00   ........ .4.J....
2610:  5E 5F 8B E5 5D CB 55 8B  EC 81 EC 00 00 57 56 83   ^_..].U. .....WV.
2620:  3E 1E 04 01 74 03 E9 0B  00 9A 3A 05 F4 00 E9 0B   >...t... ..:.....
2630:  00 E9 08 00 9A 98 05 4A  02 E9 00 00 5E 5F 8B E5   .......J ....^_..
2640:  5D CB 55 8B EC 81 EC 0A  00 57 56 2B C0 89 46 F8   ].U..... .WV+..F.
2650:  89 46 F6 2B C0 89 46 FE  89 46 FC C7 46 FA 00 00   .F.+..F. .F..F...
2660:  E9 03 00 FF 46 FA 8B 46  0A 39 46 FA 7C 03 E9 16   ....F..F .9F.|...
2670:  00 C4 5E 06 8B 76 FA 26  8A 00 2A E4 2B D2 01 46   ..^..v.& ..*.+..F
2680:  FC 11 56 FE E9 DC FF 8B  46 0A 99 52 50 8D 46 FC   ..V..... F..RP.F.
2690:  50 9A 12 35 35 04 8B 46  FC E9 00 00 5E 5F 8B E5   P..55..F ....^_..
26A0:  5D CB 55 8B EC 81 EC 00  00 57 56 F6 46 07 01 75   ].U..... .WV.F..u
26B0:  03 E9 29 00 8A 46 06 8E  06 62 0D 8B 1E 64 04 D1   ..)..F.. .b...d..
26C0:  E3 26 08 87 0B 00 26 8A  87 0B 00 98 50 A1 66 04   .&....&. ....P.f.
26D0:  40 50 9A 26 2C 35 04 83  C4 04 E9 25 00 8A 46 06   @P.&,5.. ...%..F.
26E0:  8E 06 62 0D 8B 1E 64 04  D1 E3 26 08 87 0A 00 26   ..b...d. ..&....&
26F0:  8A 87 0A 00 98 50 FF 36  66 04 9A 26 2C 35 04 83   .....P.6 f..&,5..
2700:  C4 04 5E 5F 8B E5 5D CB  55 8B EC 81 EC 00 00 57   ..^_..]. U......W
2710:  56 F6 46 07 01 75 03 E9  2B 00 8A 46 06 F6 D0 8E   V.F..u.. +..F....
2720:  06 62 0D 8B 1E 64 04 D1  E3 26 20 87 0B 00 26 8A   .b...d.. .& ...&.
2730:  87 0B 00 98 50 A1 66 04  40 50 9A 26 2C 35 04 83   ....P.f. @P.&,5..
2740:  C4 04 E9 27 00 8A 46 06  F6 D0 8E 06 62 0D 8B 1E   ...'..F. ....b...
2750:  64 04 D1 E3 26 20 87 0A  00 26 8A 87 0A 00 98 50   d...& .. .&.....P
2760:  FF 36 66 04 9A 26 2C 35  04 83 C4 04 5E 5F 8B E5   .6f..&,5 ....^_..
2770:  5D CB 55 8B EC 81 EC 00  00 57 56 8E 06 62 0D 8B   ].U..... .WV..b..
2780:  1E 64 04 D1 E3 26 8A 87  0A 00 98 50 FF 36 66 04   .d...&.. ...P.6f.
2790:  9A 26 2C 35 04 83 C4 04  8E 06 62 0D 8B 1E 64 04   .&,5.... ..b...d.
27A0:  D1 E3 26 8A 87 0B 00 98  50 A1 66 04 40 50 9A 26   ..&..... P.f.@P.&
27B0:  2C 35 04 83 C4 04 5E 5F  8B E5 5D CB 55 8B EC 81   ,5....^_ ..].U...
27C0:  EC 00 00 57 56 8E 06 62  0D 8B 1E 64 04 D1 E3 26   ...WV..b ...d...&
27D0:  8A 87 0A 00 8B 1E 64 04  D1 E3 88 87 54 04 8B 1E   ......d. ....T...
27E0:  64 04 D1 E3 26 8A 87 0B  00 8B 1E 64 04 D1 E3 88   d...&... ...d....
27F0:  87 55 04 5E 5F 8B E5 5D  CB 55 8B EC 81 EC 00 00   .U.^_..] .U......
2800:  57 56 8B 1E 64 04 D1 E3  8A 87 54 04 8E 06 62 0D   WV..d... ..T...b.
2810:  8B 1E 64 04 D1 E3 26 88  87 0A 00 8B 1E 64 04 D1   ..d...&. .....d..
2820:  E3 8A 87 55 04 8B 1E 64  04 D1 E3 26 88 87 0B 00   ...U...d ...&....
2830:  8B 1E 64 04 D1 E3 26 8A  87 0A 00 98 50 FF 36 66   ..d...&. ....P.6f
```

SAMPLE.DMP Thursday, January 6, 1994 12:01pm Page 13

```
2840:  04 9A 26 2C 35 04 83 C4  04 8E 06 62 0D 8B 1E 64   ..&,5... ...b...d
2850:  04 D1 E3 26 8A 87 0B 00  98 50 A1 66 04 40 50 9A   ...&.... .P.f.@P.
2860:  26 2C 35 04 83 C4 04 5E  5F 8B E5 5D CB 55 8B EC   &,5....^ _..].U..
2870:  81 EC 00 00 57 56 9A FA  08 4A 02 B8 10 00 50 9A   ....WV.. .J....P.
2880:  68 00 4A 02 83 C4 02 B8  08 00 50 9A 02 00 4A 02   h.J..... ..P...J.
2890:  83 C4 02 5E 5F 8B E5 5D  CB 55 8B EC 81 EC 00 00   ...^_..] .U......
28A0:  57 56 B8 08 01 50 9A 02  00 4A 02 83 C4 02 5E 5F   WV...P.. .J....^_
28B0:  8B E5 5D CB 55 8B EC 81  EC 00 00 57 56 B8 08 01   ..].U... ...WV...
28C0:  50 9A 68 00 4A 02 83 C4  02 5E 5F 8B E5 5D CB 55   P.h.J... .^_..].U
28D0:  8B EC 81 EC 00 00 57 56  9A FA 08 4A 02 3D 00 00   ......WV ...J.=..
28E0:  75 03 E9 54 00 B8 00 00  50 FF 36 66 04 9A 26 2C   u..T.... P.6f..&,
28F0:  35 04 83 C4 04 B8 0C 01  50 A1 66 04 40 50 9A 26   5....... P.f.@P.&
2900:  2C 35 04 83 C4 04 BE 00  00 E9 01 00 46 81 FE 00   ,5...... ....F...
2910:  01 7C 03 E9 23 00 56 A1  66 04 05 02 00 50 9A 26   .|..#.V. f....P.&
2920:  2C 35 04 83 C4 04 56 A1  66 04 05 03 00 50 9A 26   ,5....V. f....P.&
2930:  2C 35 04 83 C4 04 E9 D3  FF 9A D2 00 4A 02 5E 5F   ,5...... ....J.^_
2940:  8B E5 5D CB 55 8B EC 81  EC 00 00 57 56 9A FA 08   ..].U... ...WV...
2950:  4A 02 3D 00 00 75 03 E9  59 00 B8 00 00 50 FF 36   J.=..u.. Y....P.6
2960:  66 04 9A 26 2C 35 04 83  C4 04 B8 0C 01 50 A1 66   f..&,5.. .....P.f
2970:  04 40 50 9A 26 2C 35 04  83 C4 04 BE 00 00 E9 01   .@P.&,5. ........
2980:  00 46 81 FE 00 01 7C 03  E9 28 00 56 A1 66 04 05   .F....|. .(.V.f..
2990:  02 00 50 9A 26 2C 35 04  83 C4 04 B8 FF 00 2B C6   ..P.&,5. ......+.
29A0:  50 A1 66 04 05 03 00 50  9A 26 2C 35 04 83 C4 04   P.f....P .&,5....
29B0:  E9 CE FF 9A D2 00 4A 02  5E 5F 8B E5 5D CB 55 8B   ......J. ^_..].U.
29C0:  EC 81 EC 00 00 57 56 B8  04 01 50 9A 68 00 4A 02   .....WV. ..P.h.J.
29D0:  83 C4 02 9A FA 08 4A 02  8E 06 62 0D 8B 1E 64 04   ......J. ..b...d.
29E0:  D1 E3 26 8A 87 0A 00 24  EF 0C 08 98 50 FF 36 66   ..&....$ ....P.6f
29F0:  04 9A 26 2C 35 04 83 C4  04 B8 20 00 50 9A 03 08   ..&,5... .. .P...
2A00:  4A 02 83 C4 02 3D 00 00  74 03 E9 05 00 9A FA 08   J....=.. t.......
2A10:  4A 02 9A FA 08 4A 02 9A  D2 00 4A 02 5E 5F 8B E5   J....J.. ..J.^_..
2A20:  5D CB 55 8B EC 81 EC 02  00 57 56 9A 34 05 4A 02   ].U..... .WV.4.J.
2A30:  3D 00 00 75 03 E9 59 00  9A FA 08 4A 02 8E 06 62   =..u..Y. ...J...b
2A40:  0D 8B 1E 64 04 D1 E3 26  8A 87 0A 00 0C 08 98 50   ...d...& .......P
2A50:  FF 36 66 04 9A 26 2C 35  04 83 C4 04 FF 36 66 04   .6f..&,5 .....6f.
2A60:  9A 18 2C 35 04 83 C4 02  25 20 02 89 46 FE 8E 06   ..,5.... % ..F...
2A70:  62 0D 8B 1E 64 04 D1 E3  26 8A 87 0A 00 98 50 FF   b...d... &.....P.
2A80:  36 66 04 9A 26 2C 35 04  83 C4 04 8B 46 FE E9 06   6f..&,5. ....F...
2A90:  00 B8 00 00 E9 00 00 5E  5F 8B E5 5D CB 55 8B EC   .......^ _..].U..
2AA0:  81 EC 00 00 57 56 B8 20  00 50 9A 68 00 4A 02 83   ....WV.  .P.h.J..
2AB0:  C4 02 5E 5F 8B E5 5D CB  55 8B EC 81 EC 00 00 57   ..^_..]. U......W
2AC0:  56 B8 20 00 50 9A 02 00  4A 02 83 C4 02 5E 5F 8B   V. .P... J....^_.
2AD0:  E5 5D CB 55 8B EC 81 EC  02 00 57 56 8E 06 62 0D   .].U.... ..WV..b.
2AE0:  8B 1E 64 04 D1 E3 26 8A  87 0A 00 FE C0 25 03 00   ..d...&. .....%..
2AF0:  89 46 FE 8B 1E 64 04 D1  E3 26 8A 87 0A 00 24 FC   .F...d.. .&....$.
2B00:  0A 46 FE 8B 1E 64 04 D1  E3 26 88 87 0A 00 8B 1E   .F...d.. .&......
2B10:  64 04 D1 E3 26 8A 87 0A  00 98 50 FF 36 66 04 9A   d...&... ..P.6f..
2B20:  26 2C 35 04 83 C4 04 8B  46 FE E9 00 00 5E 5F 8B   &,5..... F....^_.
2B30:  E5 5D CB 55 8B EC 81 EC  00 00 57 56 8E 06 64 0D   .].U.... ..WV..d.
2B40:  26 A1 D8 65 26 8B 16 DA  65 8E 06 66 0D 26 A3 94   &..e&... e..f.&..
2B50:  CB 26 89 16 96 CB B8 00  00 50 FF 36 66 04 9A 26   .&...... .P.6f..&
2B60:  2C 35 04 83 C4 04 B8 00  00 50 A1 66 04 40 50 9A   ,5...... .P.f.@P.
2B70:  26 2C 35 04 83 C4 04 8E  06 62 0D 8B 1E 64 04 D1   &,5..... .b...d..
2B80:  E3 26 C6 87 0A 00 00 8B  1E 64 04 D1 E3 26 C6 87   .&...... .d...&..
2B90:  0B 00 00 8B 1E 64 04 D1  E3 C6 87 54 04 00 8B 1E   .....d.. ...T....
```

SAMPLE.DMP Thursday, January 6, 1994 12:01pm Page 14

```
2BA0:  64 04 D1 E3 C6 87 55 04  00 5E 5F 8B E5 5D CB 55   d.....U. .^_..].U
2BB0:  8B EC 81 EC 00 00 57 56  8A 46 06 25 07 00 A3 64   ......WV .F.%...d
2BC0:  04 B1 03 A1 64 04 05 46  00 D3 E0 A3 66 04 5E 5F   ....d..F ....f.^_
2BD0:  8B E5 5D CB 55 8B EC 81  EC 00 00 57 56 FF 36 66   ..].U... ...WV.6f
2BE0:  04 9A 18 2C 35 04 83 C4  02 24 3F 3C 3F 7C 03 E9   ...,5... .$?<?|..
2BF0:  09 00 B8 01 00 E9 3A 00  E9 37 00 B8 02 01 50 9A   ......:. .7....P.
2C00:  03 08 4A 02 83 C4 02 3D  00 00 75 03 E9 1D 00 B8   ..J....= ..u.....
2C10:  01 01 50 9A 03 08 4A 02  83 C4 02 3D 00 00 75 03   ..P...J. ...=..u.
2C20:  E9 09 00 B8 01 00 E9 09  00 E9 06 00 B8 00 00 E9   ........ ........
2C30:  00 00 5E 5F 8B E5 5D CB  55 8B EC 81 EC 00 00 57   ..^_..]. U......W
2C40:  56 9A 82 03 4A 02 E9 00  00 5E 5F 8B E5 5D CB 55   V...J... .^_..].U
2C50:  8B EC 81 EC 00 00 57 56  B8 10 00 50 9A 68 00 4A   ......WV ...P.h.J
2C60:  02 83 C4 02 5E 5F 8B E5  5D CB 55 8B EC 81 EC 00   ....^_.. ].U.....
2C70:  00 57 56 B8 08 00 50 9A  68 00 4A 02 83 C4 02 B8   .WV...P. h.J.....
2C80:  10 00 50 9A 02 00 4A 02  83 C4 02 B8 08 01 50 9A   ..P...J. ......P.
2C90:  68 00 4A 02 83 C4 02 5E  5F 8B E5 5D CB 55 8B EC   h.J....^ _..].U..
2CA0:  81 EC 04 00 57 56 8E 06  62 0D 8B 1E 64 04 D1 E3   ....WV.. b...d...
2CB0:  26 F6 87 0A 00 20 74 03  E9 45 00 8B 1E 64 04 D1   &.... t. .E...d..
2CC0:  E3 26 8A 87 0A 00 98 25  F8 FF B1 07 8B 56 08 81   .&.....% .....V..
2CD0:  E2 80 01 D3 FA 0B C2 50  FF 36 66 04 9A 26 2C 35   .......P .6f..&,5
2CE0:  04 83 C4 04 8A 66 08 D0  E4 2A C0 33 46 06 25 FF   .....f.. .*.3F.%.
2CF0:  01 8A 6E 08 D0 E5 2A C9  33 C1 89 46 FC E9 29 00   ..n...*. 3..F..).
2D00:  8E 06 62 0D 8B 1E 64 04  D1 E3 26 8A 87 0A 00 98   ..b...d. ..&.....
2D10:  25 FB FF 50 FF 36 66 04  9A 26 2C 35 04 83 C4 04   %..P.6f. .&,5....
2D20:  8A 46 06 8A 66 08 89 46  FC 8E 06 66 0D 26 C4 1E   .F..f..F ...f.&..
2D30:  94 CB 8B 76 FC 26 8A 00  88 46 FE 8A 46 0A 8E 06   ...v.&.. .F..F...
2D40:  66 0D 26 C4 1E 94 CB 8B  76 FC 26 88 00 8E 06 62   f.&..... v.&....b
2D50:  0D 8B 1E 64 04 D1 E3 26  8A 87 0A 00 98 50 FF 36   ...d...& .....P.6
2D60:  66 04 9A 26 2C 35 04 83  C4 04 8A 46 FE E9 00 00   f..&,5.. ...F....
2D70:  5E 5F 8B E5 5D CB 55 8B  EC 81 EC 04 00 57 56 8E   ^_..].U. .....WV.
2D80:  06 62 0D 8B 1E 64 04 D1  E3 26 F6 87 0A 00 20 74   .b...d.. .&.... t
2D90:  03 E9 45 00 8B 1E 64 04  D1 E3 26 8A 87 0A 00 98   ..E...d. ..&.....
2DA0:  25 F8 FF B1 07 8B 56 08  81 E2 80 01 D3 FA 0B C2   %.....V. ........
2DB0:  50 FF 36 66 04 9A 26 2C  35 04 83 C4 04 8A 66 08   P.6f..&, 5.....f.
2DC0:  D0 E4 2A C0 33 46 06 25  FF 01 8A 6E 08 D0 E5 2A   ..*.3F.% ...n...*
2DD0:  C9 33 C1 89 46 FC E9 29  00 8E 06 62 0D 8B 1E 64   .3..F..) ...b...d
2DE0:  04 D1 E3 26 8A 87 0A 00  98 25 FB FF 50 FF 36 66   ...&.... .%..P.6f
2DF0:  04 9A 26 2C 35 04 83 C4  04 8A 46 06 8A 66 08 89   ..&,5... ..F..f..
2E00:  46 FC 8E 06 66 0D 26 C4  1E 94 CB 8B 76 FC 26 8A   F...f.&. ....v.&.
2E10:  00 88 46 FE 8E 06 62 0D  8B 1E 64 04 D1 E3 26 8A   ..F...b. ..d...&.
2E20:  87 0A 00 98 50 FF 36 66  04 9A 26 2C 35 04 83 C4   ....P.6f ..&,5...
2E30:  04 8A 46 FE E9 00 00 5E  5F 8B E5 5D CB 55 8B EC   ..F....^ _..].U..
2E40:  81 EC 00 00 57 56 8E 06  62 0D 8B 1E 64 04 D1 E3   ....WV.. b...d...
2E50:  26 80 A7 0A 00 FC 8A 46  06 24 03 8B 1E 64 04 D1   &......F .$...d..
2E60:  E3 26 08 87 0A 00 26 8A  87 0A 00 98 50 FF 36 66   .&....&. ....P.6f
2E70:  04 9A 26 2C 35 04 83 C4  04 5E 5F 8B E5 5D CB 55   ..&,5... .^_..].U
2E80:  8B EC 81 EC 00 00 57 56  8E 06 62 0D 8B 1E 64 04   ......WV ..b...d.
2E90:  D1 E3 26 8A 87 0A 00 24  03 98 E9 00 00 5E 5F 8B   ..&....$ .....^_.
2EA0:  E5 5D CB 55 8B EC 81 EC  02 00 57 56 8A 66 07 25   .].U.... ..WV.f.%
2EB0:  00 03 E9 4B 00 8E 06 62  0D 8B 1E 64 04 D1 E3 26   ...K...b ...d...&
2EC0:  8A 87 0A 00 22 46 06 2A  E4 89 46 FE E9 4B 00 8E   ...."F.* ..F..K..
2ED0:  06 62 0D 8B 1E 64 04 D1  E3 26 8A 87 0B 00 22 46   .b...d.. .&...."F
2EE0:  06 2A E4 89 46 FE E9 31  00 FF 36 66 04 9A 18 2C   .*..F..1 ..6f...,
2EF0:  35 04 83 C4 02 22 46 06  2A E4 89 46 FE E9 1A 00   5...."F. *..F....
```

```
2F00:  0B C0 75 03 E9 AE FF 2D  00 01 75 03 E9 C0 FF 2D   ..u....- ..u....-
2F10:  00 01 75 03 E9 D2 FF E9  00 00 8B 46 FE E9 00 00   ..u..... ...F....
2F20:  5E 5F 8B E5 5D CB 55 8B  EC 81 EC 00 00 57 56 F6   ^_..].U. .....WV.
2F30:  46 07 01 75 03 E9 29 00  8A 46 06 8E 06 62 0D 8B   F..u..). .F...b..
2F40:  1E 64 04 D1 E3 26 30 87  0B 00 26 8A 87 0B 00 98   .d...&0. ..&.....
2F50:  50 A1 66 04 40 50 9A 26  2C 35 04 83 C4 04 E9 25   P.f.@P.& ,5.....%
2F60:  00 8A 46 06 8E 06 62 0D  8B 1E 64 04 D1 E3 26 30   ..F...b. ..d...&0
2F70:  87 0A 00 26 8A 87 0A 00  98 50 FF 36 66 04 9A 26   ...&.... .P.6f..&
2F80:  2C 35 04 83 C4 04 FF 76  06 9A 03 08 4A 02 83 C4   ,5.....v ....J...
2F90:  02 E9 00 00 5E 5F 8B E5  5D CB 55 8B EC 81 EC 00   ....^_.. ].U.....
2FA0:  00 57 56 9A 34 05 4A 02  3D 00 00 74 03 E9 09 00   .WV.4.J. =..t....
2FB0:  B8 00 00 E9 37 00 E9 34  00 B8 08 02 50 9A 03 08   ....7..4 ....P...
2FC0:  4A 02 83 C4 02 3D 00 00  75 03 E9 03 00 E9 E9 FF   J....=.. u.......
2FD0:  B8 08 02 50 9A 03 08 4A  02 83 C4 02 3D 00 00 74   ...P...J ....=..t
2FE0:  03 E9 03 00 E9 E9 FF B8  01 00 E9 00 00 5E 5F 8B   ........ .....^_.
2FF0:  E5 5D CB 55 8B EC 81 EC  00 00 57 56 9A 1E 03 4A   .].U.... ..WV...J
3000:  02 9A CA 05 4A 02 5E 5F  8B E5 5D CB 55 8B EC 81   ....J.^_ ..].U...
3010:  EC 00 00 57 56 B8 00 00  50 9A 0F 05 4A 02 83 C4   ...WV... P...J...
3020:  02 9A 93 04 4A 02 8E 06  68 0D 26 83 3E DC 65 05   ....J... h.&.>.e.
3030:  74 03 E9 08 00 9A 2F 02  4A 02 E9 05 00 9A A4 02   t...../. J.......
3040:  4A 02 9A FD 03 4A 02 9A  AF 05 4A 02 5E 5F 8B E5   J....J.. ..J.^_..
3050:  5D CB 55 8B EC 81 EC 08  00 57 56 8B 46 08 89 46   ].U..... .WV.F..F
3060:  FA 8B 46 08 39 06 52 04  7D 03 E9 09 00 83 7E 08   ..F.9.R. }.......
3070:  00 7C 03 E9 09 00 B8 01  00 E9 A3 00 E9 9A 00 8E   .|...... ........
3080:  06 62 0D 8B 1E 64 04 D1  E3 26 F6 87 0A 00 20 75   .b...d.. .&.... u
3090:  03 E9 06 00 B8 01 00 E9  85 00 8E 06 62 0D 8B 1E   ........ ....b...
30A0:  64 04 D1 E3 26 8A 87 0A  00 24 F8 98 B1 07 8B 56   d...&... .$.....V
30B0:  FA 81 E2 80 01 D3 EA 0B  C2 50 FF 36 66 04 9A 26   ........ .P.6f..&
30C0:  2C 35 04 83 C4 04 B8 20  01 50 A1 66 04 40 50 9A   ,5.....  .P.f.@P.
30D0:  26 2C 35 04 83 C4 04 8B  46 06 89 46 FE 8A 66 FA   &,5..... F..F..f.
30E0:  D0 E4 2A C0 33 46 FE 25  FF 01 8A 6E FA D0 E5 2A   ..*.3F.% ...n...*
30F0:  C9 33 C1 89 46 F8 FF 76  0A 8E 06 64 0D 26 A1 D8   .3..F..v ...d.&..
3100:  65 26 8B 16 DA 65 03 46  F8 52 50 FF 76 0E FF 76   e&...e.F .RP.v..v
3110:  0C 9A BA 31 35 04 83 C4  0A B8 00 00 E9 00 00 5E   ...15... .......^
3120:  5F 8B E5 5D CB 00 55 8B  EC 8C DB B8 80 18 8E D8   _..]..U. ........
3130:  8B 16 20 04 03 56 06 EC  32 E4 8E DB 5D CB 55 8B   .. ..V.. 2...].U.
3140:  EC 8C DB B8 80 18 8E D8  8B 16 20 04 03 56 06 8B   ........ .. ..V..
3150:  46 08 EE 8E DB 5D CB 55  8B EC 8C DB B8 80 18 8E   F....].U ........
3160:  D8 8B 16 20 04 03 56 06  EC 0B 46 08 EE 8E DB 5D   ... ..V. ..F....]
3170:  CB 55 8B EC 8C DB B8 80  18 8E D8 8B 16 20 04 03   .U...... ..... ..
3180:  56 06 EC 23 46 08 EE 8E  DB 5D CB 55 8B EC 8C DB   V..#F... .].U....
3190:  B8 80 18 8E D8 8B 16 20  04 03 56 06 EC 23 46 08   .......  ..V..#F.
31A0:  32 E4 8E DB 5D CB 55 8B  EC 8C DB B8 80 18 8E D8   2...].U. ........
31B0:  8B 16 20 04 83 C2 01 8B  46 06 A3 6A 04 3D 03 00   .. ..... F..j.=..
31C0:  75 0F 8B 46 08 B1 02 D3  E0 0B 06 6A 04 EE EB 0D   u..F.... ...j....
31D0:  90 8B 46 08 B1 05 D3 E0  0B 06 6A 04 EE 8B 16 20   ..F..... ..j....
31E0:  04 83 C2 02 8B 46 0A EE  8B 16 20 04 83 C2 03 8B   .....F.. .. .....
31F0:  46 0C EE 8E DB 5D CB 00  55 8B EC 81 EC 10 00 57   F....].. U......W
3200:  56 8D 46 F0 16 50 9A 6A  2C 35 04 83 C4 04 B8 E8   V.F..P.j ,5......
3210:  03 BA 00 00 52 50 8B 4E  06 8B 5E 08 03 4E F4 83   ....RP.N ..^..N..
3220:  D3 00 53 51 9A 9A 33 35  04 03 46 F0 13 56 F2 89   ..SQ..35 ..F..V..
3230:  46 FA 89 56 FC B8 E8 03  BA 00 00 52 50 8B 46 06   F..V.... ...RP.F.
3240:  8B 56 08 03 46 F4 83 D2  00 52 50 9A 66 34 35 04   .V..F... .RP.f45.
3250:  89 46 FE 8B 46 F0 8B 56  F2 39 56 FC 7D 03 E9 1D   .F..F..V .9V.}...
```

```
3260:  00 7E 03 E9 08 00 39 46  FA 77 03 E9 10 00 8D 46   .~....9F .w.....F
3270:  F0 16 50 9A 6A 2C 35 04  83 C4 04 E9 D5 FF 8B 46   ..P.j,5. .......F
3280:  F4 39 46 FE 77 03 E9 2B  00 8B 46 F0 8B 56 F2 39   .9F.w..+ ..F..V.9
3290:  56 FC 7D 03 E9 1D 00 7E  03 E9 08 00 39 46 FA 73   V.}....~ ....9F.s
32A0:  03 E9 10 00 8D 46 F0 16  50 9A 6A 2C 35 04 83 C4   .....F.. P.j,5...
32B0:  04 E9 CA FF 5E 5F 8B E5  5D CB 55 8B EC 81 EC 02   ....^_.. ].U.....
32C0:  00 57 56 B8 B6 00 50 B8  43 00 50 9A 26 2C 35 04   .WV...P. C.P.&,5.
32D0:  83 C4 04 B8 33 00 50 B8  42 00 50 9A 26 2C 35 04   ....3.P. B.P.&,5.
32E0:  83 C4 04 B8 05 00 50 B8  42 00 50 9A 26 2C 35 04   ......P. B.P.&,5.
32F0:  83 C4 04 B8 61 00 50 9A  18 2C 35 04 83 C4 02 88   ....a.P. .,5.....
3300:  46 FE 8A 46 FE 0C 03 98  50 B8 61 00 50 9A 26 2C   F..F.... P.a.P.&,
3310:  35 04 83 C4 04 B8 64 00  BA 00 00 52 50 9A 08 00   5.....d. ...RP...
3320:  FF 02 83 C4 04 8A 46 FE  98 50 B8 61 00 50 9A 26   ......F. .P.a.P.&
3330:  2C 35 04 83 C4 04 5E 5F  8B E5 5D CB 55 8B EC 81   ,5....^_ ..].U...
3340:  EC 00 00 57 56 5E 5F 8B  E5 5D CB 00 55 8B EC 81   ...WV^_. .]..U...
3350:  EC 00 00 57 56 83 7E 06  00 7C 03 E9 05 00 81 46   ...WV.~. .|.....F
3360:  06 68 01 83 7E 06 5A 7E  03 E9 18 00 83 7E 06 00   .h..~.Z~ .....~..
3370:  7D 03 E9 0F 00 8B 5E 06  D1 E3 8B 87 C4 06 E9 5E   }.....^. .......^
3380:  00 E9 5B 00 81 7E 06 B4  00 7E 03 E9 1B 00 83 7E   ..[..~.. .~.....~
3390:  06 5A 7F 03 E9 12 00 BB  2C 08 8B 46 06 D1 E0 2B   .Z...... ,..F...+
33A0:  D8 8B 07 E9 39 00 E9 36  00 81 7E 06 0E 01 7E 03   ....9..6 ..~...~.
33B0:  E9 1B 00 81 7E 06 B4 00  7D 03 E9 11 00 8B 5E 06   ....~... }.....^.
33C0:  D1 E3 8B 87 5C 05 F7 D8  E9 14 00 E9 11 00 BB 94   ....\... ........
33D0:  09 8B 46 06 D1 E0 2B D8  8B 07 F7 D8 E9 00 00 5E   ..F...+. .......^
33E0:  5F 8B E5 5D CB 55 8B EC  81 EC 00 00 57 56 83 7E   _..].U.. ....WV.~
33F0:  06 00 7C 03 E9 05 00 81  46 06 68 01 83 7E 06 5A   ..|..... F.h..~.Z
3400:  7E 03 E9 18 00 83 7E 06  00 7D 03 E9 0F 00 8B 5E   ~.....~. .}.....^
3410:  06 D1 E3 8B 87 0E 06 E9  5E 00 E9 5B 00 81 7E 06   ........ ^..[..~.
3420:  B4 00 7E 03 E9 1D 00 83  7E 06 5A 7F 03 E9 14 00   ..~..... ~.Z.....
3430:  BB 76 07 8B 46 06 D1 E0  2B D8 8B 07 F7 D8 E9 37   .v..F... +......7
3440:  00 E9 34 00 81 7E 06 0E  01 7E 03 E9 1B 00 81 7E   ..4..~.. .~.....~
3450:  06 B4 00 7D 03 E9 11 00  8B 5E 06 D1 E3 8B 87 A6   ...}.... .^......
3460:  04 F7 D8 E9 12 00 E9 0F  00 BB DE 08 8B 46 06 D1   ........ .....F..
3470:  E0 2B D8 8B 07 E9 00 00  5E 5F 8B E5 5D CB 55 8B   .+...... ^_..].U.
3480:  EC 81 EC 08 00 57 56 8B  46 08 0B 46 06 74 03 E9   .....WV. F..F.t..
3490:  09 00 B8 00 00 BA 00 00  E9 73 00 C7 46 FC E8 03   ........ .s..F...
34A0:  C7 46 FE 00 00 C7 46 F8  E7 03 C7 46 FA 00 00 8B   .F....F. ...F....
34B0:  46 FC 8B 56 FE 39 56 FA  7E 03 E9 48 00 7D 03 E9   F..V.9V. ~..H.}..
34C0:  08 00 39 46 F8 72 03 E9  3B 00 8B 46 F8 8B 56 FA   ..9F.r.. ;..F..V.
34D0:  89 46 FC 89 56 FE B8 02  00 BA 00 00 52 50 FF 76   .F..V... ....RP.v
34E0:  FE FF 76 FC FF 76 08 FF  76 06 9A 9A 33 35 04 03   ..v..v.. v...35..
34F0:  46 FC 13 56 FE 52 50 9A  9A 33 35 04 89 46 F8 89   F..V.RP. .35..F..
3500:  56 FA E9 AA FF 8B 46 F8  8B 56 FA E9 00 00 5E 5F   V.....F. .V....^_
3510:  8B E5 5D CB 55 8B EC 81  EC 06 00 57 56 83 7E 08   ..].U... ...WV.~.
3520:  00 74 03 E9 1A 00 83 7E  06 00 74 03 E9 09 00 B8   .t.....~ ..t.....
3530:  FF FF E9 AF 00 E9 05 00  C7 46 FE 5A 00 E9 7A 00   ........ .F.Z..z.
3540:  83 7E 06 00 74 03 E9 08  00 C7 46 FE 00 00 E9 69   .~..t... ..F....i
3550:  00 FF 76 08 9A C4 32 35  04 83 C4 02 89 46 FC FF   ..v...25 .....F..
3560:  76 06 9A C4 32 35 04 83  C4 02 89 46 FA 8B 46 FC   v...25.. ...F..F.
3570:  39 46 FA 7C 03 E9 21 00  8B 46 FC 99 52 50 B8 64   9F.|..!. .F..RP.d
3580:  00 F7 6E FA 52 50 9A 9A  33 35 04 8B D8 D1 E3 8B   ..n.RP.. 35......
3590:  87 44 05 89 46 FE E9 21  00 8B 46 FA 99 52 50 B8   .D..F..! ..F..RP.
35A0:  64 00 F7 6E FC 52 50 9A  9A 33 35 04 8B D8 D1 E3   d..n.RP. .35.....
35B0:  B8 5A 00 2B 87 44 05 89  46 FE 83 7E 08 00 7C 03   .Z.+.D.. F..~..|.
```

SAMPLE.DMP Thursday, January 6, 1994 12:01pm Page 17

```
35C0:  E9 09 00 B8 B4 00 2B 46  FE 89 46 FE 83 7E 06 00   ......+F ..F.....
35D0:  7F 03 E9 09 00 B8 68 01  2B 46 FE 89 46 FE 8B 46   ......h. +F..F..F
35E0:  FE E9 00 00 5E 5F 8B E5  5D CB 55 8B EC 81 EC 06   ....^_.. ].U.....
35F0:  00 57 56 C7 46 FE 01 00  8B 46 06 89 46 FA 83 7E   .WV.F... .F..F...
3600:  FA 00 7C 03 E9 05 00 81  46 FA 68 01 81 7E FA B4   ..|..... F.h.....
3610:  00 7D 03 E9 05 00 81 6E  FA B4 00 83 7E FA 5A 74   .}.....n ......Zt
3620:  03 E9 06 00 B8 FF FF E9  2C 00 83 7E FA 5A 7F 03   ........ ,....Z..
3630:  E9 0E 00 B8 B4 00 2B 46  FA 89 46 FA C7 46 FE FF   ......+F ..F..F..
3640:  FF 8B 5E FA D1 E3 8B 87  90 04 F7 6E FE 89 46 FC   ..^..... ...n..F.
3650:  8B 46 FC E9 00 00 5E 5F  8B E5 5D CB 55 8B EC 81   .F....^_ ..].U...
3660:  EC 02 00 57 56 B8 1A 00  F7 6E 0A 8B F0 C4 5E 06   ...WV... .n....^.
3670:  26 83 78 04 FF 75 03 E9  37 00 B8 1A 00 F7 6E 0A   &.x..u.. 7.....n.
3680:  8B F0 C4 5E 06 26 8B 40  0A 8B C8 B8 1A 00 F7 6E   ...^.&.@ .......n
3690:  0A 8B F0 C4 5E 06 26 39  48 04 75 03 E9 12 00 B8   ....^.&9 H.u.....
36A0:  1A 00 F7 6E 0A 8B F0 C4  5E 06 26 8B 40 04 E9 FF   ...n.... ^.&.@...
36B0:  00 B8 1A 00 F7 6E 0A 8B  F0 C4 5E 06 26 83 78 10   .....n.. ..^.&.x.
36C0:  FF 75 03 E9 37 00 B8 1A  00 F7 6E 0A 8B F0 C4 5E   .u..7... ..n....^
36D0:  06 26 8B 40 10 8B C8 B8  1A 00 F7 6E 0A 8B F0 C4   .&.@.... ...n....
36E0:  5E 06 26 39 48 0A 75 03  E9 12 00 B8 1A 00 F7 6E   ^.&9H.u. .......n
36F0:  0A 8B F0 C4 5E 06 26 8B  40 10 E9 B3 00 B8 1A 00   ....^.&. @.......
3700:  F7 6E 0A 8B F0 C4 5E 06  26 8B 40 0A 89 46 FE B8   .n....^. &.@..F..
3710:  1A 00 F7 6E FE 8B F0 C4  5E 06 8B 46 0A 26 39 40   ...n.... ^..F.&9@
3720:  04 74 03 E9 63 00 B8 1A  00 F7 6E FE 8B F0 C4 5E   .t..c... ..n....^
3730:  06 8B 46 0A 26 39 40 10  75 03 E9 4C 00 B8 1A 00   ..F.&9@. u..L....
3740:  F7 6E FE 8B F0 C4 5E 06  26 83 78 10 FF 75 03 E9   .n....^. &.x..u..
3750:  37 00 B8 1A 00 F7 6E FE  8B F0 C4 5E 06 26 8B 40   7.....n. ...^.&.@
3760:  10 8B C8 B8 1A 00 F7 6E  FE 8B F0 C4 5E 06 26 39   .......n ....^.&9
3770:  48 0A 75 03 E9 12 00 B8  1A 00 F7 6E FE 8B F0 C4   H.u..... ...n....
3780:  5E 06 26 8B 40 10 E9 27  00 8B 46 FE 89 46 0A B8   ^.&.@..' ..F..F..
3790:  1A 00 F7 6E 0A 8B F0 C4  5E 06 26 8B 40 0A 89 46   ...n.... ^.&.@..F
37A0:  FE 40 74 03 E9 06 00 B8  FF FF E9 03 00 E9 5F FF   .@t..... ......_.
37B0:  5E 5F 8B E5 5D CB 55 8B  EC 81 EC 00 00 57 56 8B   ^_..].U. .....WV.
37C0:  46 0A 2B 46 06 50 8B 46  0C 2B 46 08 50 9A D4 01   F.+F.P.F .+F.P...
37D0:  14 03 83 C4 04 E9 00 00  5E 5F 8B E5 5D CB 55 8B   ........ ^_..].U.
37E0:  EC 81 EC 02 00 57 56 FF  76 14 FF 76 12 FF 76 10   .....WV. v..v..v.
37F0:  FF 76 0E 9A 66 01 45 03  83 C4 08 FF 76 0C FF 76   .v..f.E. ....v..v
3800:  0A FF 76 08 FF 76 06 8B  F0 9A 66 01 45 03 83 C4   ..v..v.. ..f.E...
3810:  08 2B C6 89 46 FE 81 7E  FE B4 00 7F 03 E9 09 00   .+..F... ........
3820:  8B 46 FE 2D 68 01 E9 16  00 81 7E FE 4C FF 7D 03   .F.-h... ...L.}.
3830:  E9 06 00 8B 46 FE E9 06  00 8B 46 FE 05 68 01 E9   ....F... ..F..h..
3840:  00 00 5E 5F 8B E5 5D CB  55 8B EC 81 EC 08 00 57   ..^_..]. U......W
3850:  56 FF 36 C6 13 FF 36 C4  13 C4 5E 06 26 8B 07 99   V.6...6. ..^.&...
3860:  52 50 9A 34 34 35 04 FF  36 D2 13 FF 36 D0 13 C4   RP.445.. 6...6...
3870:  5E 0A 8B C8 26 8B 07 8B  DA 99 52 50 8B F1 8B FB   ^...&... ..RP....
3880:  9A 34 34 35 04 03 F0 13  FA 03 36 DC 13 13 3E DE   .445.... ..6...>.
3890:  13 81 C6 88 13 83 D7 00  89 76 FC 89 7E FE FF 36   ........ .v....6
38A0:  CA 13 FF 36 C8 13 C4 5E  06 26 8B 07 99 52 50 9A   ...6...^ .&...RP.
38B0:  34 34 35 04 FF 36 D6 13  FF 36 D4 13 C4 5E 0A 8B   445..6.. .6...^..
38C0:  C8 26 8B 07 8B DA 99 52  50 8B F1 8B FB 9A 34 34   .&.....R P.....44
38D0:  35 04 03 F0 13 FA 03 36  E0 13 13 3E E2 13 81 C6   5......6 ...>....
38E0:  88 13 83 D7 00 89 76 F8  89 7E FA B8 10 27 BA 00   ......v. .....'..
38F0:  00 52 50 FF 76 FE FF 76  FC 9A 9A 33 35 04 C4 5E   .RP.v..v ...35..^
3900:  06 26 89 07 B8 10 27 BA  00 00 52 50 FF 76 FA FF   .&....'. ..RP.v..
3910:  76 F8 9A 9A 33 35 04 C4  5E 0A 26 89 07 5E 5F 8B   v...35.. ^.&..^_.
```

```
3920:  E5 5D CB 55 8B EC 81 EC  06 00 57 56 FF 76 14 FF   .].U.... ..WV.v..
3930:  76 12 FF 76 10 FF 76 0E  FF 76 0C FF 76 0A FF 76   v..v..v. .v..v..v
3940:  08 FF 76 06 9A 8E 01 45  03 83 C4 10 89 46 FA 83   ..v....E .....F..
3950:  7E FA 00 7C 03 E9 27 00  8B 46 FA F7 D8 50 9A A5   ~..|..'. .F...P..
3960:  00 14 03 83 C4 02 89 46  FE 8B 46 FA F7 D8 50 9A   .......F ..F...P.
3970:  0C 00 14 03 83 C4 02 F7  D8 89 46 FC E9 1C 00 FF   ........ ..F.....
3980:  76 FA 9A A5 00 14 03 83  C4 02 89 46 FE FF 76 FA   v....... ...F..v.
3990:  9A 0C 00 14 03 83 C4 02  89 46 FC 8B 46 FE 99 A3   ........ .F..F...
39A0:  C4 13 89 16 C6 13 8B 46  FC F7 D8 99 A3 D0 13 89   .......F ........
39B0:  16 D2 13 8B 46 08 F7 D8  F7 6E FC 8B C8 8B 46 06   ....F... .n....F.
39C0:  F7 D8 8B DA F7 6E FE 2B  C1 1B D3 8B C8 B8 10 27   .....n.+ .......'
39D0:  8B DA F7 6E 0E 03 C1 13  D3 A3 DC 13 89 16 DE 13   ...n.... ........
39E0:  8B 46 FC 99 A3 C8 13 89  16 CA 13 8B 46 FE 99 A3   .F...... ....F...
39F0:  D4 13 89 16 D6 13 8B 46  08 F7 D8 F7 6E FE 8B C8   .......F ....n...
3A00:  8B 46 06 F7 D8 8B DA F7  6E FC 03 C8 13 DA B8 10   .F...... n.......
3A10:  27 F7 6E 10 03 C8 13 DA  89 0E E0 13 89 1E E2 13   '.n..... ........
3A20:  2B C0 A3 CE 13 A3 CC 13  2B C0 A3 DA 13 A3 D8 13   +....... +.......
3A30:  C7 06 E4 13 01 00 C7 06  E6 13 00 00 5E 5F 8B E5   ........ ....^_..
3A40:  5D CB 55 8B EC 81 EC 0C  00 57 56 83 7E 0A FF 75   ].U..... .WV.~..u
3A50:  03 E9 07 02 B8 1A 00 F7  6E 0A 03 46 06 8B 56 08   ........ n..F..V.
3A60:  05 04 00 1E 8D 7E F8 8B  F0 16 07 8E DA A5 A5 A5   .....~.. ........
3A70:  1F B8 1A 00 F7 6E 0A 8B  F0 C4 5E 06 26 83 78 0A   .....n.. ..^.&.x.
3A80:  FF 74 03 E9 08 00 C7 46  F4 02 00 E9 30 00 B8 1A   .t.....F ....0...
3A90:  00 F7 6E 0A 8B F0 C4 5E  06 B8 1A 00 26 F7 68 0A   ..n....^ ....&.h.
3AA0:  8B F0 C4 5E 06 8B 46 0A  26 39 40 04 74 03 E9 08   ...^..F. &9@.t...
3AB0:  00 C7 46 F4 02 00 E9 05  00 C7 46 F4 16 00 8B 46   ..F..... ..F....F
3AC0:  0C E9 6F 01 B8 1A 00 F7  6E 0A 03 46 06 8B 56 08   ..o..... n..F..V.
3AD0:  05 10 00 8B C8 B8 1A 00  8B DA F7 6E 0A 8B F0 8B   ........ ...n....
3AE0:  C3 C4 5E 06 1E 8D 78 04  8B F1 8E D8 A5 A5 A5 1F   ..^...x. ........
3AF0:  B8 1A 00 F7 6E 0A 03 46  06 8B 56 08 05 0A 00 8B   ....n..F ..V.....
3B00:  C8 B8 1A 00 8B DA F7 6E  0A 8B F0 8B C3 C4 5E 06   .......n ......^.
3B10:  1E 8D 78 10 8B F1 8E D8  A5 A5 A5 1F B8 1A 00 F7   ..x..... ........
3B20:  6E 0A 8B F0 C4 5E 06 8D  78 0A 8D 76 F8 A5 A5 A5   n....^.. x..v....
3B30:  FF 76 F4 B8 1A 00 F7 6E  0A 8B F0 C4 5E 06 26 FF   .v.....n ....^.&.
3B40:  70 10 FF 76 08 FF 76 06  9A 17 06 45 03 83 C4 08   p..v..v. ...E....
3B50:  89 46 F6 B8 0A 00 50 B8  1A 00 F7 6E 0A 8B F0 C4   .F....P. ...n....
3B60:  5E 06 26 FF 70 0A FF 76  08 FF 76 06 9A 17 06 45   ^.&.p..v ..v....E
3B70:  03 83 C4 08 89 46 FE E9  C9 00 B8 1A 00 F7 6E 0A   .....F.. ......n.
3B80:  03 46 06 8B 56 08 05 0A  00 8B C8 B8 1A 00 8B DA   .F..V... ........
3B90:  F7 6E 0A 8B F0 8B C3 C4  5E 06 1E 8D 78 04 8B F1   .n...... ^...x...
3BA0:  8E D8 A5 A5 A5 1F B8 1A  00 F7 6E 0A 03 46 06 8B   ........ ..n..F..
3BB0:  56 08 05 10 00 8B C8 B8  1A 00 8B DA F7 6E 0A 8B   V....... .....n..
3BC0:  F0 8B C3 C4 5E 06 1E 8D  78 0A 8B F1 8E D8 A5 A5   ....^... x.......
3BD0:  A5 1F B8 1A 00 F7 6E 0A  8B F0 C4 5E 06 8D 78 10   ......n. ...^..x.
3BE0:  8D 76 F8 A5 A5 A5 FF 76  F4 B8 1A 00 F7 6E 0A 8B   .v.....v .....n..
3BF0:  F0 C4 5E 06 26 FF 70 04  FF 76 08 FF 76 06 9A 17   ..^.&.p. .v..v...
3C00:  06 45 03 83 C4 08 89 46  F6 B8 F4 FF 50 B8 1A 00   .E.....F ....P...
3C10:  F7 6E 0A 8B F0 C4 5E 06  26 FF 70 0A FF 76 08 FF   .n....^. &.p..v..
3C20:  76 06 9A 17 06 45 03 83  C4 08 89 46 FE E9 13 00   v....E.. ...F....
3C30:  E9 10 00 40 75 03 E9 41  FF 48 48 75 03 E9 84 FE   ...@u..A .HHu....
3C40:  E9 00 00 83 7E FE FF 75  03 E9 09 00 8B 46 FE E9   ....~..u .....F..
3C50:  0F 00 E9 06 00 8B 46 0A  E9 06 00 B8 FF FF E9 00   ......F. ........
3C60:  00 5E 5F 8B E5 5D CB 55  8B EC 81 EC 0A 00 57 56   .^_..].U ......WV
3C70:  83 7E 0A FF 75 03 E9 CC  03 8B 46 0C E9 7F 03 B8   .~..u... ..F.....
```

```
3C80:  1A 00 F7 6E 0A 03 46 06  8B 56 08 05 04 00 1E 8D   ...n..F. .V......
3C90:  7E F8 8B F0 16 07 8E DA  A5 A5 A5 1F B8 1A 00 F7   ~....... ........
3CA0:  6E 0A 03 46 06 8B 56 08  05 10 00 8B C8 B8 1A 00   n..F..V. ........
3CB0:  8B DA F7 6E 0A 8B F0 8B  C3 C4 5E 06 1E 8D 78 04   ...n.... ..^...x.
3CC0:  8B F1 8E D8 A5 A5 A5 1F  B8 1A 00 F7 6E 0A 03 46   ........ ....n..F
3CD0:  06 8B 56 08 05 0A 00 8B  C8 B8 1A 00 8B DA F7 6E   ..V..... .......n
3CE0:  0A 8B F0 8B C3 C4 5E 06  1E 8D 78 10 8B F1 8E D8   ......^. ..x.....
3CF0:  A5 A5 A5 1F B8 1A 00 F7  6E 0A 8B F0 C4 5E 06 8D   ........ n....^..
3D00:  78 0A 8D 76 F8 A5 A5 A5  B8 0A 00 50 B8 1A 00 F7   x..v.... ...P....
3D10:  6E 0A 8B F0 C4 5E 06 26  FF 70 0A FF 76 08 FF 76   n....^.& .p..v..v
3D20:  06 9A 17 06 45 03 83 C4  08 89 46 FE E9 F2 02 B8   ....E... ..F.....
3D30:  1A 00 F7 6E 0A 03 46 06  8B 56 08 05 10 00 1E 8D   ...n..F. .V......
3D40:  7E F8 8B F0 16 07 8E DA  A5 A5 A5 1F B8 1A 00 F7   ~....... ........
3D50:  6E 0A 03 46 06 8B 56 08  05 04 00 8B C8 B8 1A 00   n..F..V. ........
3D60:  8B DA F7 6E 0A 8B F0 8B  C3 C4 5E 06 1E 8D 78 10   ...n.... ..^...x.
3D70:  8B F1 8E D8 A5 A5 A5 1F  B8 1A 00 F7 6E 0A 03 46   ........ ....n..F
3D80:  06 8B 56 08 05 0A 00 8B  C8 B8 1A 00 8B DA F7 6E   ..V..... .......n
3D90:  0A 8B F0 8B C3 C4 5E 06  1E 8D 78 04 8B F1 8E D8   ......^. ..x.....
3DA0:  A5 A5 A5 1F B8 1A 00 F7  6E 0A 8B F0 C4 5E 06 8D   ........ n....^..
3DB0:  78 0A 8D 76 F8 A5 A5 A5  B8 F4 FF 50 B8 1A 00 F7   x..v.... ...P....
3DC0:  6E 0A 8B F0 C4 5E 06 26  FF 70 0A FF 76 08 FF 76   n....^.& .p..v..v
3DD0:  06 9A 17 06 45 03 83 C4  08 89 46 FE E9 42 02 B8   ....E... ..F..B..
3DE0:  1A 00 F7 6E 0A 03 46 06  8B 56 08 05 10 00 1E 8D   ...n..F. .V......
3DF0:  7E F8 8B F0 16 07 8E DA  A5 A5 A5 1F B8 1A 00 F7   ~....... ........
3E00:  6E 0A 8B F0 C4 5E 06 26  83 78 0A FF 74 03 E9 0E   n....^.& .x..t...
3E10:  00 8B 46 0A 89 46 FE C7  46 F6 FF FF E9 30 00 B8   ..F..F.. F....0..
3E20:  1A 00 F7 6E 0A 8B F0 C4  5E 06 B8 1A 00 26 F7 68   ...n.... ^....&.h
3E30:  0A 8B F0 C4 5E 06 8B 46  0A 26 39 40 04 74 03 E9   ....^..F .&9@.t..
3E40:  08 00 C7 46 F6 02 00 E9  05 00 C7 46 F6 16 00 B8   ...F.... ...F....
3E50:  1A 00 F7 6E 0A 03 46 06  8B 56 08 05 0A 00 8B C8   ...n..F. .V......
3E60:  B8 1A 00 8B DA F7 6E 0A  8B F0 8B C3 C4 5E 06 1E   ......n. .....^..
3E70:  8D 78 10 8B F1 8E D8 A5  A5 A5 1F B8 1A 00 F7 6E   .x...... .......n
3E80:  0A 03 46 06 8B 56 08 05  04 00 8B C8 B8 1A 00 8B   ..F..V.. ........
3E90:  DA F7 6E 0A 8B F0 8B C3  C4 5E 06 1E 8D 78 0A 8B   ..n..... .^...x..
3EA0:  F1 8E D8 A5 A5 A5 1F B8  1A 00 F7 6E 0A 8B F0 C4   ........ ...n....
3EB0:  5E 06 8D 78 04 8D 76 F8  A5 A5 A5 83 7E F6 FF 74   ^..x..v. ....~..t
3EC0:  03 E9 03 00 E9 5A 01 FF  76 F6 B8 1A 00 F7 6E 0A   .....Z.. v.....n.
3ED0:  8B F0 C4 5E 06 26 FF 70  10 FF 76 08 FF 76 06 9A   ...^.&.p ..v..v..
3EE0:  17 06 45 03 83 C4 08 89  46 FE E9 34 01 B8 1A 00   ..E..... F..4....
3EF0:  F7 6E 0A 03 46 06 8B 56  08 05 10 00 1E 8D 7E F8   .n..F..V ......~.
3F00:  8B F0 16 07 8E DA A5 A5  A5 1F B8 1A 00 F7 6E 0A   ........ ......n.
3F10:  8B F0 C4 5E 06 26 83 78  0A FF 74 03 E9 0E 00 8B   ...^.&.x ..t.....
3F20:  46 0A 89 46 FE C7 46 F6  FF FF E9 30 00 B8 1A 00   F..F..F. ...0....
3F30:  F7 6E 0A 8B F0 C4 5E 06  B8 1A 00 26 F7 68 0A 8B   .n....^. ...&.h..
3F40:  F0 C4 5E 06 8B 46 0A 26  39 40 04 74 03 E9 08 00   ..^..F.& 9@.t....
3F50:  C7 46 F6 02 00 E9 05 00  C7 46 F6 16 00 B8 1A 00   .F...... .F......
3F60:  F7 6E 0A 03 46 06 8B 56  08 05 04 00 8B C8 B8 1A   .n..F..V ........
3F70:  00 8B DA F7 6E 0A 8B F0  8B C3 C4 5E 06 1E 8D 78   ....n... ...^...x
3F80:  10 8B F1 8E D8 A5 A5 A5  1F B8 1A 00 F7 6E 0A 03   ........ .....n..
3F90:  46 06 8B 56 08 05 0A 00  8B C8 B8 1A 00 8B DA F7   F..V.... ........
3FA0:  6E 0A 8B F0 8B C3 C4 5E  06 1E 8D 78 04 8B F1 8E   n......^ ...x....
3FB0:  D8 A5 A5 A5 1F B8 1A 00  F7 6E 0A 8B F0 C4 5E 06   ........ .n....^.
3FC0:  8D 78 0A 8D 76 F8 A5 A5  A5 83 7E F6 FF 74 03 E9   .x..v... ..~..t..
3FD0:  03 00 E9 4C 00 FF 76 F6  B8 1A 00 F7 6E 0A 8B F0   ...L..v. ....n...
```

```
3FE0:  C4 5E 06 26 FF 70 04 FF  76 08 FF 76 06 9A 17 06   .^.&.p.. v..v....
3FF0:  45 03 83 C4 08 89 46 FE  E9 26 00 E9 23 00 2D F4   E.....F. .&..#.-.
4000:  FF 75 03 E9 29 FD 2D 0E  00 75 03 E9 D1 FD 2D 08   .u..).-. .u....-.
4010:  00 75 03 E9 69 FC 2D 0C  00 75 03 E9 CF FE E9 00   .u..i.-. .u......
4020:  00 B8 1A 00 F7 6E 0A 8B  F0 C4 5E 06 26 83 78 0A   .....n.. ..^.&.x.
4030:  FF 74 03 E9 09 00 8B 46  0A E9 0F 00 E9 06 00 8B   .t.....F ........
4040:  46 FE E9 06 00 B8 FF FF  E9 00 00 5E 5F 8B E5 5D   F....... ...^_..]
4050:  CB 55 8B EC 81 EC 04 00  57 56 C7 46 FE FF FF B8   .U...... WV.F....
4060:  1A 00 F7 6E 1C 8B F0 C4  5E 12 8B 46 1A 26 39 40   ...n.... ^..F.&9@
4070:  0A 74 03 E9 7B 00 B8 1A  00 F7 6E 0E 8B F0 C4 5E   .t..{... ..n....^
4080:  06 8B 46 10 26 39 40 04  74 03 E9 32 00 B8 1A 00   ..F.&9@. t..2....
4090:  F7 6E 1A 8B F0 C4 5E 12  8B 46 1C 26 39 40 10 74   .n....^. .F.&9@.t
40A0:  03 E9 18 00 B8 01 00 50  FF 76 1A FF 76 14 FF 76   .......P .v..v..v
40B0:  12 9A F2 03 45 03 83 C4  08 89 46 FE E9 2F 00 B8   ....E... ..F../..
40C0:  1A 00 F7 6E 1A 8B F0 C4  5E 12 8B 46 1C 26 39 40   ...n.... ^..F.&9@
40D0:  04 74 03 E9 18 00 B8 FF  FF 50 FF 76 1A FF 76 14   .t...... .P.v..v.
40E0:  FF 76 12 9A F2 03 45 03  83 C4 08 89 46 FE E9 4A   .v....E. ....F..J
40F0:  00 B8 1A 00 F7 6E 0E 8B  F0 C4 5E 06 8B 46 10 26   .....n.. ..^..F.&
4100:  39 40 10 74 03 E9 1B 00  B8 01 00 50 FF 76 1A FF   9@.t.... ...P.v..
4110:  76 14 FF 76 12 9A F2 03  45 03 83 C4 08 89 46 FE   v..v.... E.....F.
4120:  E9 18 00 B8 FF FF 50 FF  76 1A FF 76 14 FF 76 12   ......P. v..v..v.
4130:  9A F2 03 45 03 83 C4 08  89 46 FE 83 7E FE FF 75   ...E.... .F..~..u
4140:  03 E9 20 00 B8 1A 00 F7  6E 1A 8B F0 C4 5E 12 26   .. ..... n....^.&
4150:  8B 40 16 89 46 FC 8B 5E  FC D1 E3 C4 76 16 8B 46   .@..F..^ ....v..F
4160:  FE 26 89 00 8B 46 FE E9  00 00 5E 5F 8B E5 5D CB   .&...F.. ..^_..].
4170:  55 8B EC 81 EC 00 00 57  56 83 3E 7A 07 00 75 03   U......W V.>z..u.
4180:  E9 0E 00 FF 76 06 9A 1F  0D 45 03 83 C4 02 E9 0B   ....v... .E......
4190:  00 FF 76 06 9A 52 0B 45  03 83 C4 02 5E 5F 8B E5   ..v..R.E ....^_..
41A0:  5D CB 55 8B EC 81 EC 14  00 57 56 83 7E 06 00 74   ].U..... .WV.~..t
41B0:  03 E9 20 00 C7 46 EC D4  B8 C7 46 EE C2 0B 8E 06   .. ..F.. ..F.....
41C0:  6A 0D 26 A1 E0 65 89 46  FA C7 46 FC 94 67 8C 46   j.&..e.F ..F..g.F
41D0:  FE E9 1D 00 C7 46 EC 10  53 C7 46 EE C2 0B 8E 06   .....F.. S.F.....
41E0:  6C 0D 26 A1 1C 00 89 46  FA C7 46 FC D0 01 8C 46   l.&....F ..F....F
41F0:  FE B8 04 00 50 B8 00 00  50 FF 76 EE FF 76 EC 9A   ....P... P.v..v..
4200:  18 32 35 04 83 C4 08 C7  46 F6 00 00 B8 00 00 89   .25..... F.......
4210:  46 F0 89 46 F8 E9 03 00  FF 46 F0 8B 46 FA 39 46   F..F.... .F..F.9F
4220:  F8 7C 03 E9 43 01 83 7E  F8 FF 75 03 E9 37 01 C7   .|..C..~ ..u..7..
4230:  46 F2 00 00 B8 1A 00 F7  6E F8 8B D8 C4 76 FC 26   F....... n....v.&
4240:  8B 00 8B 5E F2 8B CB D1  E3 03 D9 D1 E3 C4 76 EC   ...^.... ......v.
4250:  26 39 00 7C 03 E9 11 00  8B 46 F6 39 46 F2 7C 03   &9.|.... .F.9F.|.
4260:  E9 06 00 FF 46 F2 E9 CB  FF B8 1A 00 F7 6E F8 8B   ....F... .....n..
4270:  D8 C4 76 FC 26 8B 00 8B  5E F2 8B CB D1 E3 03 D9   ..v.&... ^.......
4280:  D1 E3 C4 76 EC 26 39 00  74 03 E9 37 00 B8 1A 00   ...v.&9. t..7....
4290:  F7 6E F8 8B F0 C4 5E FC  26 8B 40 02 8B 76 F2 8B   .n....^. &.@..v..
42A0:  CE D1 E6 03 F1 D1 E6 C4  5E EC 26 39 40 02 7C 03   ........ ^.&9@.|.
42B0:  E9 11 00 8B 46 F6 39 46  F2 7C 03 E9 06 00 FF 46   ....F.9F .|.....F
42C0:  F2 E9 A5 FF 8B 46 F6 89  46 F4 E9 03 00 FF 4E F4   .....F.. F.....N.
42D0:  8B 46 F2 39 46 F4 7F 03  E9 30 00 8B 5E F4 8B C3   .F.9F... .0..^...
42E0:  D1 E3 03 D8 D1 E3 C4 76  EC 8B 46 F4 8B C8 D1 E0   .......v ..F.....
42F0:  03 C1 D1 E0 03 46 EC 8B  56 EE 2D 06 00 1E 8D 38   .....F.. V.-....8
4300:  8B F0 8E DA A5 A5 A5 1F  E9 C2 FF FF 46 F6 B8 1A   ........ ....F...
4310:  00 F7 6E F8 8B D8 C4 76  FC 26 8B 00 8B 5E F2 8B   ..n....v .&...^..
4320:  CB D1 E3 03 D9 D1 E3 C4  76 EC 26 89 00 B8 1A 00   ........ v.&.....
4330:  F7 6E F8 8B F0 C4 5E FC  26 8B 40 02 8B 76 F2 8B   .n....^. &.@..v..
```

SAMPLE.DMP Thursday, January 6, 1994 12:01pm Page 21


```
4340:  CE D1 E6 03 F1 D1 E6 C4  5E EC 26 89 40 02 8B 46   ........ ^.&.@..F
4350:  F8 8B 76 F2 8B CE D1 E6  03 F1 D1 E6 C4 5E EC 26   ..v..... .....^.&
4360:  89 40 04 FF 46 F8 E9 AF  FE 5E 5F 8B E5 5D CB 55   .@..F... .^_..].U
4370:  8B EC 81 EC 1C 00 57 56  83 7E 06 00 74 03 E9 2C   ......WV .~..t..,
4380:  00 C7 46 E8 D4 B8 C7 46  EA C2 0B C7 46 FC 94 67   ..F....F ....F..g
4390:  C7 46 FE C2 0B C7 46 E4  04 66 C7 46 E6 C2 0B 8E   .F....F. .f.F....
43A0:  06 6A 0D 26 A1 DE 65 89  46 EE E9 29 00 C7 46 E8   .j.&..e. F..)..F.
43B0:  10 53 C7 46 EA C2 0B C7  46 FC D0 01 C7 46 FE C2   .S.F.... F....F..
43C0:  0B C7 46 E4 40 00 C7 46  E6 C2 0B 8E 06 6C 0D 26   ..F.@..F .....l.&
43D0:  A1 1A 00 89 46 EE B8 04  00 50 B8 00 00 50 FF 76   ....F... .P...P.v
43E0:  EA FF 76 E8 9A 18 32 35  04 83 C4 08 C7 46 F8 00   ..v...25 .....F..
43F0:  00 C7 46 F2 00 00 E9 03  00 FF 46 F2 8B 46 EE 39   ..F..... ..F..F.9
4400:  46 F2 7C 03 E9 4C 01 8B  5E F2 D1 E3 C4 76 E4 26   F.|..L.. ^....v.&
4410:  8B 00 89 46 FA 83 7E FA  00 7D 03 E9 32 01 B8 1A   ...F..~. .}..2...
4420:  00 F7 6E FA 8B D8 C4 76  FC 26 8B 00 89 46 F0 3D   ..n....v .&...F.=
4430:  00 00 7D 03 E9 02 01 B8  1A 00 F7 6E FA 8B F0 C4   ..}..... ...n....
4440:  5E FC 26 8B 40 02 89 46  EC C7 46 F4 00 00 E9 03   ^.&.@..F ..F.....
4450:  00 FF 46 F4 8B 46 F8 39  46 F4 7C 03 E9 52 00 8B   ..F..F.9 F.|..R..
4460:  5E F4 8B C3 D1 E3 03 D8  D1 E3 C4 76 E8 8B 46 F0   ^....... ...v..F.
4470:  26 39 00 7E 03 E9 33 00  8B 5E F4 8B C3 D1 E3 03   &9.~..3. .^......
4480:  D8 D1 E3 C4 76 E8 8B 46  F0 26 39 00 74 03 E9 1D   ....v..F .&9.t...
4490:  00 8B 76 F4 8B C6 D1 E6  03 F0 D1 E6 C4 5E E8 8B   ..v..... .....^..
44A0:  46 EC 26 39 40 02 7F 03  E9 03 00 E9 03 00 E9 A0   F.&9@... ........
44B0:  FF 8B 46 F8 89 46 F6 E9  03 00 FF 4E F6 8B 46 F4   ..F..F.. ...N..F.
44C0:  39 46 F6 7F 03 E9 30 00  8B 5E F6 8B C3 D1 E3 03   9F....0. .^......
44D0:  D8 D1 E3 C4 76 E8 8B 46  F6 8B C8 D1 E0 03 C1 D1   ....v..F ........
44E0:  E0 03 46 E8 8B 56 EA 2D  06 00 1E 8D 38 8B F0 8E   ..F..V.- ....8...
44F0:  DA A5 A5 A5 1F E9 C2 FF  8B 5E F4 8B C3 D1 E3 03   ........ .^......
4500:  D8 D1 E3 C4 76 E8 8B 46  F0 26 89 00 8B 46 EC 8B   ....v..F .&...F..
4510:  76 F4 8B CE D1 E6 03 F1  D1 E6 C4 5E E8 26 89 40   v....... ...^.&.@
4520:  02 8B 46 FA 8B 76 F4 8B  CE D1 E6 03 F1 D1 E6 C4   ..F..v.. ........
4530:  5E E8 26 89 40 04 FF 46  F8 FF 76 FA FF 76 FE FF   ^.&.@..F ..v..v..
4540:  76 FC 9A 0C 00 45 03 83  C4 06 89 46 FA E9 C5 FE   v....E.. ...F....
4550:  E9 A6 FE 5E 5F 8B E5 5D  CB 00 11 00 B1 B4 30 CD   ...^_..] ......0.
4560:  21 3C 02 73 05 33 C0 06  50 CB BF 80 18 8B 36 02   !<.s.3.. P.....6.
4570:  00 2B F7 81 FE 00 10 72  03 BE 00 10 FA 8E D7 81   .+.....r ........
4580:  C4 1E 16 FB 73 12 16 1F  0E E8 59 02 33 C0 50 0E   ....s... ..Y.3.P.
4590:  E8 3B 05 B8 FF 4C CD 21  8B C6 B1 04 D3 E0 48 36   .;...L.! ......H6
45A0:  A3 80 07 BB 82 07 36 8C  17 83 E4 FE 36 89 67 04   ......6. ....6.g.
45B0:  B8 FE FF 50 36 89 67 0A  F7 D0 50 36 89 67 06 36   ...P6.g. ..P6.g.6
45C0:  89 67 08 36 89 26 7C 07  03 F7 89 36 02 00 8C C3   .g.6.&|. ...6....
45D0:  2B DE F7 DB B4 4A CD 21  36 8C 1E BC 07 16 07 FC   +....J.! 6.......
45E0:  BF 34 0F B9 20 16 2B CF  33 C0 F3 AA 16 1F 8B 0E   .4.. .+. 3.......
45F0:  1E 0D E3 02 FF D1 9A C0  04 35 04 9A 12 03 35 04   ........ .5....5.
4600:  33 ED 9A 1A 01 35 04 16  1F FF 36 E1 07 FF 36 DF   3....5.. ..6...6.
4610:  07 FF 36 DD 07 FF 36 DB  07 FF 36 D9 07 9A 00 00   ..6...6. ..6.....
4620:  00 00 50 0E E8 FB 00 C3  2E A1 17 01 8E D8 B8 03   ..P..... ........
4630:  00 36 C7 06 7E 07 DF 01  50 0E E8 A8 01 0E E8 8D   .6..~... P.......
4640:  04 36 81 3E 20 0D D6 D6  75 07 58 50 36 FF 16 24   .6.> ... u.XP6..$
4650:  0D B8 FF 00 50 0E FF 16  7E 07 80 18 00 B8 00 35   ....P... ~......5
4660:  CD 21 89 1E A8 07 8C 06  AA 07 0E 1F B8 00 25 BA   .!...... ......%.
4670:  E5 00 CD 21 16 1F 8B 0E  32 0D E3 2E 8E 06 BC 07   ...!.... 2.......
4680:  26 8B 36 2C 00 C5 06 34  0D 8C DA 33 DB 36 FF 1E   &.6,...4 ...3.6..
4690:  30 0D 73 05 16 1F E9 6E  01 36 C5 06 38 0D 8C DA   0.s....n .6..8...
```

SAMPLE.DMP Thursday, January 6, 1994 12:01pm Page 22

```
46A0:  BB 03 00 36 FF 1E 30 0D  16 1F 8E 06 BC 07 26 8B   ...6..0. ......&.
46B0:  0E 2C 00 E3 3E 8E C1 33  FF 26 80 3D 00 74 34 B9   .,..>..3 .&.=.t4.
46C0:  0D 00 BE 9A 07 F3 A6 74  0B B9 FF 7F 33 C0 F2 AE   .......t ....3...
46D0:  75 21 EB E5 06 1E 07 1F  8B F7 BF C5 07 B1 04 AC   u!...... ........
46E0:  2C 41 72 0D D2 E0 92 AC  2C 41 72 05 0A C2 AA EB   ,Ar..... ,Ar.....
46F0:  EE 16 1F BB 04 00 80 A7  C5 07 BF B8 00 44 CD 21   ........ .....D.!
4700:  72 0A F6 C2 80 74 05 80  8F C5 07 40 4B 79 E7 BE   r....t.. ...@Ky..
4710:  3C 0D BF 3C 0D E8 BA 00  BE 3C 0D BF 44 0D E8 B1   <..<.... .<..D...
4720:  00 CB 55 8B EC 33 C9 EB  1A 55 8B EC B9 01 00 EB   ..U..3.. .U......
4730:  12 55 8B EC 56 57 B9 00  01 EB 08 55 8B EC 56 57   .U..VW.. ...U..VW
4740:  B9 01 01 51 0A C9 75 1E  BE 1E 14 BF 1E 14 E8 81   ...Q..u. ........
4750:  00 BE 44 0D BF 48 0D E8  78 00 81 3E 20 0D D6 D6   ..D..H.. x..> ...
4760:  75 04 FF 16 26 0D BE 48  0D BF 48 0D E8 63 00 BE   u...&..H ..H..c..
4770:  48 0D BF 48 0D E8 5A 00  9A EE 02 35 04 0B C0 74   H..H..Z. ...5...t
4780:  11 58 0A E4 50 75 0B 83  7E 06 00 75 05 C7 46 06   .X..Pu.. ~..u..F.
4790:  FF 00 E8 10 00 58 0A E4  75 07 8B 46 06 B4 4C CD   .....X.. u..F..L.
47A0:  21 5F 5E 5D CB 8B 0E 32  0D E3 07 BB 02 00 FF 1E   !_^]...2 ........
47B0:  30 0D 1E C5 16 A8 07 B8  00 25 CD 21 1F 80 3E EA   0....... .%.!..>.
47C0:  07 00 74 0D 1E A0 EB 07  C5 16 EC 07 B4 25 CD 21   ..t..... .....%.!
47D0:  1F C3 3B F7 73 0E 83 EF  04 8B 05 0B 45 02 74 F2   ..;.s... ....E.t.
47E0:  FF 1D EB EE C3 55 8B EC  B8 FC 00 50 0E E8 DE 02   .....U.. ...P....
47F0:  83 3E F2 07 00 74 04 FF  1E F0 07 B8 FF 00 50 0E   .>...t.. ......P.
4800:  E8 CB 02 8B E5 5D CB B8  02 00 E9 2B FE 59 5A 8B   .....].. ...+.YZ.
4810:  DC 2B D8 72 0B 3B 1E F8  07 72 05 8B E3 52 51 CB   .+.r.;.. .r...RQ.
4820:  52 51 A1 F4 07 40 75 05  33 C0 E9 0B FE FF 2E F4   RQ...@u. 3.......
4830:  07 56 33 F6 B9 42 00 32  E4 FC AC 32 E0 E2 FB 80   .V3..B.2 ...2....
4840:  F4 55 74 0F 0E E8 9D FF  B8 01 00 50 0E E8 7E 02   .Ut..... ...P..~.
4850:  B8 01 00 5E CB 8F 06 FA  07 8F 06 FC 07 B4 30 CD   ...^.... ......0.
4860:  21 A3 BE 07 BA 01 00 3C  02 74 29 8E 06 BC 07 26   !......< .t)....&
4870:  8E 06 2C 00 8C 06 E5 07  33 C0 99 B9 00 80 33 FF   ..,..... 3.....3.
4880:  F2 AE AE 75 FB 47 47 89  3E E3 07 B9 FF FF F2 AE   ...u.GG. >.......
4890:  F7 D1 8B D1 BF 01 00 BE  81 00 8E 1E BC 07 AC 3C   ........ .......<
48A0:  20 74 FB 3C 09 74 F7 3C  0D 74 6F 0A C0 74 6B 47    t.<.t.< .to..tkG
48B0:  4E AC 3C 20 74 E8 3C 09  74 E4 3C 0D 74 5C 0A C0   N.< t.<. t.<.t\..
48C0:  74 58 3C 22 74 24 3C 5C  74 03 42 EB E4 33 C9 41   tX<"t$<\ t.B..3.A
48D0:  AC 3C 5C 74 FA 3C 22 74  04 03 D1 EB D3 8B C1 D1   .<\t.<"t ........
48E0:  E9 13 D1 A8 01 75 CA EB  01 4E AC 3C 0D 74 2B 0A   .....u.. .N.<.t+.
48F0:  C0 74 27 3C 22 74 BA 3C  5C 74 03 42 EB EC 33 C9   .t'<"t.< \t.B..3.
4900:  41 AC 3C 5C 74 FA 3C 22  74 04 03 D1 EB DB 8B C1   A.<\t.<" t.......
4910:  D1 E9 13 D1 A8 01 75 D2  EB 97 16 1F 89 3E D9 07   ......u. .....>..
4920:  03 D7 47 D1 E7 D1 E7 03  D7 42 80 E2 FE 2B E2 8B   ..G..... .B...+..
4930:  C4 A3 DB 07 8C 16 DD 07  8B D8 03 FB 16 07 36 89   ........ ......6.
4940:  3F 36 8C 57 02 83 C3 04  C5 36 E3 07 AC AA 0A C0   ?6.W.... .6......
4950:  75 FA 36 8E 1E BC 07 BE  81 00 EB 03 33 C0 AA AC   u.6..... ....3...
4960:  3C 20 74 FB 3C 09 74 F7  3C 0D 75 03 E9 84 00 0A   < t.<.t. <.u.....
4970:  C0 75 03 EB 7E 90 36 89  3F 36 8C 57 02 83 C3 04   .u..~.6. ?6.W....
4980:  4E AC 3C 20 74 D6 3C 09  74 D2 3C 0D 74 62 0A C0   N.< t.<. t.<.tb..
4990:  74 5E 3C 22 74 27 3C 5C  74 03 AA EB E4 33 C9 41   t^<"t'<\ t....3.A
49A0:  AC 3C 5C 74 FA 3C 22 74  06 B0 5C F3 AA EB D1 B0   .<\t.<"t ..\.....
49B0:  5C D1 E9 F3 AA 73 06 B0  22 AA EB C5 4E AC 3C 0D   \....s.. "...N.<.
49C0:  74 2E 0A C0 74 2A 3C 22  74 B7 3C 5C 74 03 AA EB   t...t*<" t.<\t...
49D0:  EC 33 C9 41 AC 3C 5C 74  FA 3C 22 74 06 B0 5C F3   .3.A.<\t .<"t..\.
49E0:  AA EB D9 B0 5C D1 E9 F3  AA 73 96 B0 22 AA EB CD   ....\... .s.."...
49F0:  33 C0 AA 16 1F C7 07 00  00 C7 47 02 00 00 FF 2E   3....... ..G.....
```

```
4A00:  FA 07 00 55 8B EC 83 EC  04 1E 8E 06 BC 07 26 8B   ...U.... ......&.
4A10:  1E 2C 00 8E C3 8C 46 FE  33 C0 33 F6 33 FF B9 FF   .,....F. 3.3.3...
4A20:  FF 0B DB 74 0E 26 80 3E  00 00 00 74 06 F2 AE 46   ...t.&.> ...t...F
4A30:  AE 75 FA 8B C7 40 24 FE  46 8B FE D1 E6 D1 E6 B9   .u...@$. F.......
4A40:  09 00 E8 C0 00 52 50 8B  C6 E8 B9 00 A3 DF 07 89   .....RP. ........
4A50:  16 E1 07 89 56 FC 06 1F  8B CF 8B D8 33 F6 5F 07   ....V... ....3._.
4A60:  49 E3 33 8B 04 36 3B 06  9A 07 75 14 51 56 57 06   I.3..6;. ..u.QVW.
4A70:  16 07 BF 9A 07 B9 06 00  F3 A7 07 5F 5E 59 74 0B   ........ ..._^Yt.
4A80:  8E 5E FC 89 3F 8C 47 02  83 C3 04 8E 5E FE AC AA   .^..?.G. ....^...
4A90:  0A C0 75 FA E2 CD 8E 5E  FC 89 0F 89 4F 02 1F 8B   ..u....^ ....O...
4AA0:  E5 5D CB 55 8B EC 56 57  1E 07 8B 56 06 BE 84 0D   .].U..VW ...V....
4AB0:  AD 3B C2 74 10 40 96 74  0C 97 33 C0 B9 FF FF F2   .;.t.@.t ..3.....
4AC0:  AE 8B F7 EB EB 96 5F 5E  8B E5 5D CA 02 00 55 8B   ......_^ ..]...U.
4AD0:  EC 57 FF 76 06 0E E8 CA  FF 0B C0 74 20 92 8B FA   .W.v.... ...t ...
4AE0:  33 C0 B9 FF FF F2 AE F7  D1 49 BB 02 00 81 3E 20   3....... .I....>
4AF0:  0D D6 D6 75 04 FF 16 22  0D B4 40 CD 21 5F 8B E5   ...u..." ..@.!_..
4B00:  5D CA 02 00 00 53 06 51  B9 00 04 87 0E 82 0A 51   ]....S.Q .......Q
4B10:  50 9A F2 22 35 04 5B 8F  06 82 0A 59 8B DA 0B D8   P.."5.[. ...Y....
4B20:  74 03 07 5B C3 8B C1 E9  0E FB 00 72 15 33 C0 8B   t..[.... ...r.3..
4B30:  E5 5D CB 73 F8 50 E8 1A  00 58 32 E4 8B E5 5D CB   .].s.P.. .X2...].
4B40:  73 07 E8 0E 00 B8 FF FF  99 8B E5 5D CB 32 E4 E8   s....... ...].2..
4B50:  01 00 CB A2 C1 07 0A E4  75 22 80 3E BE 07 03 72   ........ u".>...r
4B60:  0C 3C 22 73 0C 3C 20 72  04 B0 05 EB 06 3C 13 76   .<"s.< r .....<.v
4B70:  02 B0 13 BB FE 07 D7 98  A3 B6 07 C3 8A C4 EB F7   ........ ........
4B80:  00 55 8B EC 83 EC 10 57  56 BF FF FF 8B 76 06 F6   .U.....W V....v..
4B90:  44 0A 40 74 03 E9 A3 00  F6 44 0A 83 75 03 E9 9A   D.@t.... .D..u...
4BA0:  00 1E 56 9A F4 0E 35 04  83 C4 04 8B F8 8B DE 81   ..V...5. ........
4BB0:  EB 18 08 8B 87 0C 09 89  46 FA 1E 56 E8 32 06 83   ........ F..V.2..
4BC0:  C4 04 8A 44 0B 2A E4 50  9A 1A 1E 35 04 83 C4 02   ...D.*.P ...5....
4BD0:  0B C0 7C 64 83 7E FA 00  74 61 B8 12 08 1E 50 8D   ..|d.~.. ta....P.
4BE0:  46 F0 16 50 9A FE 25 35  04 83 C4 08 8D 46 F2 89   F..P..%5 .....F..
4BF0:  46 FC 8C 56 FE 80 7E F0  5C 74 14 B8 14 08 1E 50   F..V..~. \t.....P
4C00:  8D 46 F0 16 50 9A B8 25  35 04 83 C4 08 EB 03 FF   .F..P..% 5.......
4C10:  4E FC B8 0A 00 50 FF 76  FE FF 76 FC FF 76 FA 9A   N....P.v ..v..v..
4C20:  8E 27 35 04 83 C4 08 8D  46 F0 16 50 9A 10 33 35   .'5..... F..P..35
4C30:  04 83 C4 04 0B C0 74 03  BF FF FF C6 44 0A 00 8B   ......t. ....D...
4C40:  C7 5E 5F 8B E5 5D CB 55  8B EC 83 EC 08 9A 06 1D   .^_..].U ........
4C50:  35 04 89 56 FE 0B D0 75  06 2B C0 99 EB 19 90 FF   5..V...u .+......
4C60:  76 FE 50 FF 76 0E FF 76  0C FF 76 0A FF 76 08 FF   v.P.v..v ..v..v..
4C70:  76 06 9A 32 0D 35 04 8B  E5 5D CB 55 8B EC 2B C0   v..2.5.. .].U..+.
4C80:  50 FF 76 0C FF 76 0A FF  76 08 FF 76 06 9A 04 07   P.v..v.. v..v....
4C90:  35 04 8B E5 5D CB 90 55  8B EC 83 EC 06 57 56 8B   5...]..U .....WV.
4CA0:  76 06 1E 56 E8 C6 06 83  C4 04 8B F8 8D 46 0E 16   v..V.... .....F..
4CB0:  50 FF 76 0C FF 76 0A 1E  56 9A 1C 18 35 04 83 C4   P.v..v.. V...5...
4CC0:  0C 89 46 FA 1E 56 57 E8  24 07 83 C4 06 8B 46 FA   ..F..VW. $.....F.
4CD0:  5E 5F 8B E5 5D CB 90 55  8B EC 83 EC 04 56 57 8B   ^_..]..U .....VW.
4CE0:  46 0A F7 66 0C 8B C8 0B  CA 74 61 89 46 FC 89 56   F..f.... .ta.F..V
4CF0:  FE C4 5E 06 8B 76 0E 0B  D2 75 1F 3D FF FF 74 1A   ..^..v.. .u.=..t.
4D00:  8B CB 03 C8 72 14 50 53  52 8B C8 E8 6A 00 8B C8   ....r.PS R...j...
4D10:  5A 5B 58 2B C1 83 DA 00  EB 3C 83 FB 01 77 05 B9   Z[X+.... .<...w..
4D20:  00 80 EB 04 8B CB F7 D9  51 50 53 52 E8 49 00 8B   ........ QPSR.I..
4D30:  C8 5A 5B 58 5F 2B C1 83  DA 00 3B CF 72 18 03 D9   .Z[X_+.. ..;.r...
4D40:  73 0C 8C C1 81 C1 00 10  8E C1 EB 02 EB 24 8B C8   s....... .....$..
4D50:  0B CA 75 A3 EB 00 8B C8  0B CA 74 13 8B 4E FC 2B   ..u..... ..t..N.+
```

```
4D60:  C8 8B C1 8B 4E FE 1B CA  8B D1 F7 76 0A EB 03 8B   ....N... ...v....
4D70:  46 0C 5F 5E 8B E5 5D CB  55 8B EC 83 EC 04 89 4E   F._^..]. U......N
4D80:  FE BF 08 09 8B C6 2D 18  08 03 F8 F6 44 0A 0C 75   ......-. ....D..u
4D90:  05 F6 05 01 74 05 8B 45  02 EB 03 B8 00 02 89 46   ....t..E .......F
4DA0:  FC F6 44 0A 0C 75 05 F6  05 01 74 33 8B 44 04 0B   ..D..u.. ..t3.D..
4DB0:  C0 74 2C 3B C1 76 02 8B  C1 50 53 51 06 50 FF 74   .t,;.v.. .PSQ.P.t
4DC0:  02 FF 34 06 53 0E E8 34  29 83 C4 0A 07 59 5B 58   ..4.S..4 )....Y[X
4DD0:  2B C8 29 44 04 03 D8 01  04 EB 00 E3 62 EB C2 3B   +.)D.... ....b..;
4DE0:  4E FC 72 30 33 D2 8B C1  F7 76 FC 8B C1 2B C2 53   N.r03... .v...+.S
4DF0:  51 06 50 06 53 33 C0 8A  44 0B 50 0E E8 C4 17 83   Q.P.S3.. D.P.....
4E00:  C4 08 07 59 5B 0B C0 74  2C 3D FF FF 74 2D 2B C8   ...Y[..t ,=..t-+.
4E10:  03 D8 EB C7 53 51 06 1E  56 0E E8 4C 02 83 C4 04   ....SQ.. V..L....
4E20:  07 59 5B 3D FF FF 74 17  26 88 07 43 49 8B 45 02   .Y[=..t. &..CI.E.
4E30:  89 46 FC EB A6 80 4C 0A  10 EB 04 80 4C 0A 20 8B   .F....L. ....L. .
4E40:  46 FE 2B C1 8B E5 5D C3  00 55 8B EC 83 EC 06 8D   F.+...]. .U......
4E50:  46 0E 16 50 FF 76 0C FF  76 0A FF 76 08 FF 76 06   F..P.v.. v..v..v.
4E60:  9A C8 0F 35 04 8B E5 5D  CB 55 8B EC 83 EC 04 56   ...5...] .U.....V
4E70:  57 8B 46 0A F7 66 0C 8B  C8 0B CA 74 61 89 46 FC   W.F..f.. ...ta.F.
4E80:  89 56 FE C4 5E 06 8B 76  0E 0B D2 75 1F 3D FF FF   .V..^..v ...u.=..
4E90:  74 1A 8B CB 03 C8 72 14  50 53 52 8B C8 E8 6A 00   t.....r. PSR...j.
4EA0:  8B C8 5A 5B 58 2B C1 83  DA 00 EB 3C 83 FB 01 77   ..Z[X+.. ...<...w
4EB0:  05 B9 00 80 EB 04 8B CB  F7 D9 51 50 53 52 E8 49   ........ ..QPSR.I
4EC0:  00 8B C8 5A 5B 58 5F 2B  C1 83 DA 00 3B CF 72 18   ...Z[X_+ ....;.r.
4ED0:  03 D9 73 0C 8C C1 81 C1  00 10 8E C1 EB 02 EB 24   ..s..... .......$
4EE0:  8B C8 0B CA 75 A3 EB 00  8B C8 0B CA 74 13 8B 4E   ....u... ....t..N
4EF0:  FC 2B C8 8B C1 8B 4E FE  1B CA 8B D1 F7 76 0A EB   .+....N. .....v..
4F00:  03 8B 46 0C 5F 5E 8B E5  5D CB 55 8B EC 83 EC 04   ..F._^.. ].U.....
4F10:  89 4E FE BF 08 09 8B C6  2D 18 08 03 F8 F6 44 0A   .N...... -.....D.
4F20:  0C 75 05 F6 05 01 74 05  8B 45 02 EB 03 B8 00 02   .u....t. .E......
4F30:  89 46 FC F6 44 0A 08 75  05 F6 05 01 74 36 8B 44   .F..D..u ....t6.D
4F40:  04 0B C0 74 2F 3B C1 76  02 8B C1 50 53 51 06 50   ...t/;.v ...PSQ.P
4F50:  06 53 FF 74 02 FF 34 0E  E8 A2 27 83 C4 0A 07 59   .S.t..4. ..'....Y
4F60:  5B 58 2B C8 29 44 04 03  D8 01 04 EB 00 0B C9 75   [X+.)D.. .......u
4F70:  C2 E9 83 00 3B 4E FC 72  50 F6 44 0A 08 75 05 F6   ....;N.r P.D..u..
4F80:  05 01 74 13 53 51 06 1E  56 0E E8 AA 04 83 C4 04   ..t.SQ.. V.......
4F90:  07 59 5B 0B C0 75 60 33  D2 8B C1 F7 76 FC 8B C1   .Y[..u`3 ....v...
4FA0:  2B C2 50 53 51 06 50 06  53 33 C0 8A 44 0B 50 0E   +.PSQ.P. S3..D.P.
4FB0:  E8 0E 17 83 C4 08 07 59  5B 5A 3D FF FF 74 34 2B   .......Y [Z=..t4+
4FC0:  C8 3B C2 75 2E 03 D8 EB  A4 33 C0 26 8A 07 53 51   .;.u.... .3.&..SQ
4FD0:  06 1E 56 50 0E E8 2D 01  83 C4 06 07 59 5B 3D FF   ..VP..-. ....Y[=.
4FE0:  FF 74 14 43 49 8B 45 02  0B C0 75 01 40 89 46 FC   .t.CI.E. ..u.@.F.
4FF0:  E9 7A FF 80 4C 0A 20 8B  46 FE 2B C1 8B E5 5D C3   .z..L. . F.+...].
5000:  00 55 8B EC 83 EC 06 57  B8 24 08 1E 50 E8 5D 03   .U.....W .$..P.].
5010:  83 C4 04 8B F8 8D 46 0A  16 50 FF 76 08 FF 76 06   ......F. .P.v..v.
5020:  B8 24 08 1E 50 9A 1C 18  35 04 83 C4 0C 89 46 FA   .$..P... 5.....F.
5030:  B8 24 08 1E 50 57 E8 B5  03 83 C4 06 8B 46 FA 5F   .$..PW.. .....F._
5040:  8B E5 5D CB 90 55 8B EC  83 EC 04 56 8D 46 0A 16   ..]..U.. ...V.F..
5050:  50 FF 76 08 FF 76 06 BE  18 08 1E 56 9A C8 0F 35   P.v..v.. ...V...5
5060:  04 83 C4 0C 5E 8B E5 5D  CB 55 8B EC 56 57 8B 76   ....^..] .U..VW.v
5070:  06 8A 44 0A A8 83 74 5F  A8 40 75 5B A8 02 75 48   ..D...t_ .@u[..uH
5080:  0C 01 88 44 0A 8B FE 81  EF 18 08 81 C7 08 09 A8   ...D.... ........
5090:  0C 75 0D F6 05 01 75 08  1E 56 E8 8C 01 83 C4 04   .u....u. .V......
50A0:  8B 44 06 89 04 FF 75 02  FF 74 08 50 33 DB 8A 5C   .D....u. .t.P3..\
50B0:  0B 53 0E E8 0D 15 83 C4  08 0B C0 74 11 3D FF FF   .S...... ...t.=..
```

```
50C0:  75 1A 80 4C 0A 20 EB 0A  80 4C 0A 20 EB 09 80 4C   u..L. .. .L. ...L
50D0:  0A 10 C7 44 04 00 00 B8  FF FF EB 25 8A BF C5 07   ...D.... ...%....
50E0:  80 E7 82 80 FF 82 75 0B  8A 7C 0A F6 C7 82 75 03   ......u. .|....u.
50F0:  80 0D 20 48 89 44 04 C4  1C 33 C0 26 8A 07 43 89   .. H.D.. .3.&..C.
5100:  1C 5F 5E 5D CB 55 8B EC  56 57 8B 76 08 8A 44 0A   ._^].U.. VW.v..D.
5110:  A8 82 74 6A A8 40 75 66  C7 44 04 00 00 A8 01 74   ..tj.@uf .D.....t
5120:  0B A8 10 74 59 8B 4C 06  89 0C 24 FE 0C 02 24 EF   ...tY.L. ..$...$.
5130:  88 44 0A 8B FE 81 EF 18  08 81 C7 08 09 33 DB 8A   .D...... .....3..
5140:  5C 0B A8 08 75 51 A8 04  75 1E F6 05 01 75 48 81   \...uQ.. u....uH.
5150:  FE 24 08 74 0C 81 FE 30  08 74 06 81 FE 48 08 75   .$.t...0 .t...H.u
5160:  26 F6 87 C5 07 40 74 1F  B9 01 00 51 16 8D 7E 06   &....@t. ...Q..~.
5170:  57 53 0E E8 4B 15 83 C4  08 B9 01 00 EB 46 B8 FF   WS..K... .....F..
5180:  FF 80 4C 0A 20 EB 65 53  1E 56 E8 9C 00 83 C4 04   ..L. .eS .V......
5190:  5B F6 44 0A 08 74 D1 8B  0C 8B 54 06 2B CA 42 89   [.D..t.. ..T.+.B.
51A0:  14 8B 55 02 4A 89 54 04  E3 25 51 51 FF 74 08 FF   ..U.J.T. .%QQ.t..
51B0:  74 06 53 0E E8 0A 15 83  C4 08 59 C4 7C 06 8B 56   t.S..... ..Y.|..V
51C0:  06 26 88 15 3B C1 75 B6  33 C0 8A 46 06 EB 1D 33   .&..;.u. 3..F...3
51D0:  C0 F6 87 C5 07 20 74 E3  B9 02 00 51 50 50 53 0E   ..... t. ...QPPS.
51E0:  E8 9A 11 83 C4 08 33 C0  8B C8 EB CF 5F 5E 5D CB   ......3. ...._^].
51F0:  00 55 8B EC 56 8B 76 04  8A 44 0A A8 83 74 26 A8   .U..V.v. .D...t&.
5200:  08 74 22 FF 74 08 FF 74  06 9A F8 22 35 04 83 C4   .t".t..t ..."5...
5210:  04 80 64 0A F7 33 C0 89  44 06 89 44 08 89 04 89   ..d..3.. D..D....
5220:  44 02 89 44 04 5E 5D C3  00 55 8B EC 56 8B 76 04   D..D.^]. .U..V.v.
5230:  B8 00 02 50 9A F2 22 35  04 59 8B DE 81 EB 18 08   ...P.."5 .Y......
5240:  81 C3 08 09 0B D2 74 0B  80 4C 0A 08 C7 47 02 00   ......t. .L...G..
5250:  02 EB 0E 80 4C 0A 04 C7  47 02 01 00 8C DA 8D 47   ....L... G......G
5260:  01 89 54 02 89 04 89 54  08 89 44 06 C7 44 04 00   ..T....T ..D..D..
5270:  00 5E 5D C3 00 55 8B EC  83 EC 08 57 56 C4 5E 0A   .^]..U.. ...WV.^.
5280:  26 8A 07 98 3D 77 00 74  48 77 08 2C 61 74 4C 2C   &...=w.t Hw.,atL,
5290:  11 74 06 2B C0 99 E9 CD  00 2B F6 C6 46 FC 01 C7   .t.+.... .+..F...
52A0:  46 FE 01 00 FF 46 0A C4  5E 0A 26 80 3F 00 74 5B   F....F.. ^.&.?.t[
52B0:  83 7E FE 00 74 55 26 8A  07 98 3D 74 00 74 34 77   .~..tU&. ..=t.t4w
52C0:  08 2C 2B 74 1C 2C 37 74  36 C7 46 FE 00 00 EB D4   .,+t.,7t 6.F.....
52D0:  90 BE 01 03 C6 46 FC 02  EB C5 90 BE 09 01 EB F4   .....F.. ........
52E0:  90 F7 C6 02 00 75 E2 83  CE 02 83 E6 FE C6 46 FC   .....u.. ......F.
52F0:  80 EB B1 F7 C6 00 C0 75  D0 81 CE 00 40 EB A5 F7   .......u ....@...
5300:  C6 00 C0 75 C4 81 CE 00  80 EB 99 B8 A4 01 50 FF   ...u.... ......P.
5310:  76 0E 56 FF 76 08 FF 76  06 9A B4 1E 35 04 83 C4   v.V.v..v ....5...
5320:  0A 89 46 FA 0B C0 7D 03  E9 68 FF FF 06 16 08 8B   ..F...}. .h......
5330:  7E 10 8B C7 2D 18 08 05  08 09 89 46 F8 8A 46 FC   ~...-... ...F..F.
5340:  88 45 0A 8B 5E F8 C6 07  00 2B C0 89 45 04 89 47   .E..^... .+..E..G
5350:  04 89 45 02 89 05 89 45  08 89 45 06 8A 46 FA 88   ..E....E ..E..F..
5360:  45 0B 8B C7 8C DA 5E 5F  8B E5 5D CB 90 55 8B EC   E.....^_ ..]..U..
5370:  56 57 8B 76 04 BB FC 09  81 FE 24 08 74 12 BB 00   VW.v.... ..$.t...
5380:  0A 81 FE 30 08 74 09 BB  04 0A 81 FE 48 08 75 58   ...0.t.. ....H.uX
5390:  8B FE 81 EF 18 08 81 C7  08 09 F6 44 0A 0C 75 48   ........ ...D..uH
53A0:  F6 05 01 75 43 8B 07 8B  57 02 8B C8 0B CA 74 21   ...uC... W.....t!
53B0:  89 44 06 89 54 08 89 04  89 54 02 C7 44 04 00 02   .D..T... .T..D...
53C0:  C7 45 02 00 02 80 4C 0A  02 C6 05 11 B8 01 00 EB   .E....L. ........
53D0:  19 53 B8 00 02 50 9A F2  22 35 04 5B 5B 0B D2 74   .S...P.. "5.[[..t
53E0:  07 89 07 89 57 02 EB C8  33 C0 5F 5E 5D C3 55 8B   ....W... 3._^].U.
53F0:  EC 56 57 8B 76 06 8B FE  81 EF 18 08 81 C7 08 09   .VW.v... ........
5400:  F6 05 10 74 2D 33 DB 8A  5C 0B F6 87 C5 07 40 74   ...t-3.. \.....@t
5410:  21 1E 56 0E E8 20 00 83  C4 04 83 7E 04 00 74 12   !.V.. .. ...~..t.
```

```
5420:  33 C0 88 05 89 45 02 89  04 89 44 02 89 44 06 89   3....E.. ..D..D..
5430:  44 08 5F 5E 5D C3 00 55  8B EC 83 EC 02 57 56 2B   D._^]..U .....WV+
5440:  FF 8B 46 08 0B 46 06 75  08 2B C0 50 E8 70 00 EB   ..F..F.u .+.P.p..
5450:  5F 8B 76 06 8A 44 0A 8B  C8 24 03 3C 02 75 3F F6   _.v..D.. .$.<.u?.
5460:  C1 08 75 0D 8B DE 81 EB  18 08 F6 87 08 09 01 74   ..u..... .......t
5470:  2D 8B 04 2B 44 06 89 46  FE 0B C0 7E 21 50 FF 74   -..+D..F ...~!P.t
5480:  08 FF 74 06 8A 4C 0B 2A  ED 51 9A 7E 21 35 04 83   ..t..L.* .Q.~!5..
5490:  C4 08 39 46 FE 74 07 80  4C 0A 20 BF FF FF 8B 44   ..9F.t.. L. ....D
54A0:  06 8B 54 08 89 04 89 54  02 C7 44 04 00 00 8B C7   ..T....T ..D.....
54B0:  5E 5F 8B E5 5D CB 90 B8  01 00 50 E8 01 00 CB 55   ^_..]... ..P....U
54C0:  8B EC 83 EC 02 57 56 BE  18 08 2B FF 89 7E FE EB   .....WV. ..+..~..
54D0:  08 C7 46 FE FF FF 83 C6  0C 39 36 F8 09 72 16 F6   ..F..... .96..r..
54E0:  44 0A 83 74 F1 1E 56 9A  F4 0E 35 04 83 C4 04 40   D..t..V. ..5....@
54F0:  74 DF 47 EB E1 83 7E 04  01 75 04 8B C7 EB 03 8B   t.G...~. .u......
5500:  46 FE 5E 5F 8B E5 5D C2  02 00 90 55 8B EC B8 B4   F.^_..]. ...U....
5510:  01 9A CA 02 35 04 57 56  C6 46 B8 00 2B C0 89 46   ....5.WV .F..+..F
5520:  E8 89 46 C6 C4 5E 0A 26  80 3F 00 75 03 E9 6F 07   ..F..^.& .?.u..o.
5530:  26 8A 1F 2A FF F6 87 A3  0A 08 74 2D FF 4E E8 8D   &..*.... ..t-.N..
5540:  46 E8 16 50 FF 76 08 FF  76 06 E8 DE 07 50 FF 76   F..P.v.. v....P.v
5550:  08 FF 76 06 E8 B6 07 FF  46 0A C4 5E 0A 26 8A 1F   ..v..... F..^.&..
5560:  2A FF F6 87 A3 0A 08 75  EE 8B 5E 0A 26 80 3F 25   *......u ..^.&.?%
5570:  74 03 E9 02 07 C6 46 C0  00 2A C0 88 46 FC 88 46   t.....F. .*..F..F
5580:  B6 88 46 F2 88 46 F6 88  46 EE 88 86 52 FE 2B C0   ..F..F.. F...R.+.
5590:  89 46 EA 89 46 BA 89 46  FE 89 46 C4 89 46 C2 EB   .F..F..F ..F..F..
55A0:  68 90 90 FF 46 0A C4 5E  0A 26 8A 07 2A E4 8B F8   h...F..^ .&..*...
55B0:  F6 85 A3 0A 04 74 1A FF  46 BA 8B 46 FE 8B C8 D1   .....t.. F..F....
55C0:  E0 D1 E0 03 C1 D1 E0 03  C7 2D 30 00 89 46 FE EB   ........ .-0..F..
55D0:  38 3D 6C 00 74 1C 77 2D  3C 4C 74 13 7F 1F 2C 2A   8=l.t.w- <Lt...,*
55E0:  74 15 2C 1C 74 23 EB 1D  90 FE 46 FC EB 1B 90 FE   t.,.t#.. ..F.....
55F0:  46 F6 FE 46 F6 EB 12 FE  46 EE EB 0D 90 2C 4E 74   F..F.... F....,Nt
5600:  08 2C 1A 74 E4 FE 86 52  FE 80 BE 52 FE 00 74 93   .,.t...R ...R..t.
5610:  80 7E EE 00 75 14 C4 5E  0E 83 46 0E 04 26 8B 07   .~..u..^ ..F..&..
5620:  26 8B 57 02 89 46 F8 89  56 FA C6 86 52 FE 00 C4   &.W..F.. V...R...
5630:  5E 0A 26 8A 07 0C 20 2A  E4 8B F8 83 FF 6E 74 29   ^.&... * .....nt)
5640:  83 FF 63 74 16 83 FF 7B  74 11 8D 46 E8 16 50 FF   ..ct...{ t..F..P.
5650:  76 08 FF 76 06 E8 D3 06  EB 0D 90 FF 46 E8 FF 76   v..v.... ....F..v
5660:  08 FF 76 06 E8 74 06 8B  F0 83 7E BA 00 74 09 83   ..v..t.. ..~..t..
5670:  7E FE 00 75 03 E9 93 05  8B C7 E9 B0 05 83 7E BA   ~..u.... ......~.
5680:  00 75 06 FF 46 BA FF 46  FE C7 46 BC 0E 0A 8C 5E   .u..F..F ..F....^
5690:  BE EB 23 C7 46 BC 08 0A  EB F4 90 FF 46 0A C4 5E   ..#.F... ....F..^
56A0:  0A 89 5E BC 8C 46 BE 26  80 3F 5E 75 0C 8D 47 01   ..^..F.& .?^u..G.
56B0:  89 46 BC 8C 46 BE FE 4E  B6 B8 20 00 50 2B C0 50   .F..F..N .. .P+.P
56C0:  8D 46 C8 16 50 9A 18 32  35 04 83 C4 08 83 FF 7B   .F..P..2 5......{
56D0:  74 03 E9 B3 00 C4 5E BC  26 80 3F 5D 74 03 E9 A7   t.....^. &.?]t...
56E0:  00 C6 46 C0 5D FF 46 BC  C6 46 D3 20 E9 99 00 26   ..F.].F. .F. ...&
56F0:  8A 07 88 46 F4 FF 46 BC  3C 2D 75 0F 80 7E C0 00   ...F..F. <-u..~..
5700:  74 09 8B 5E BC 26 80 3F  5D 75 24 8A 5E F4 88 5E   t..^.&.? ]u$.^..^
5710:  C0 B0 01 8A CB 80 E1 07  8B D1 8A CA D2 E0 B1 03   ........ ........
5720:  D2 EB 2A FF 8D 4E C8 03  D9 36 08 07 EB 5A 90 FF   ..*..N.. .6...Z..
5730:  46 BC 26 8A 07 88 46 F4  3A 46 C0 76 06 88 46 F0   F.&...F. :F.v..F.
5740:  EB 0D 90 8A 46 C0 88 46  F0 8A 46 F4 88 46 C0 8A   ....F..F ..F..F..
5750:  46 C0 88 46 F4 EB 21 8A  5E F4 B0 01 8A CB 80 E1   F..F..!. ^.......
5760:  07 8B D1 8A CA D2 E0 B1  03 D2 EB 2A FF 8D 4E C8   ........ ...*..N.
5770:  03 D9 36 08 07 FE 46 F4  8A 46 F0 98 8A 4E F4 2A   ..6...F. .F...N.*
```

```
5780:  ED 3B C1 7D D2 88 6E C0  C4 5E BC 26 80 3F 5D 74   .;.}..n. .^.&.?]t
5790:  03 E9 5B FF 26 80 3F 00  75 03 E9 02 05 83 FF 7B   ..[.&.?. u......{
57A0:  75 0A 8B C3 8C C2 89 46  0A 89 56 0C 8B 46 F8 8B   u......F ..V..F..
57B0:  56 FA 89 86 54 FE 89 96  56 FE 83 7E BA 00 74 0A   V...T... V..~..t.
57C0:  8B 46 FE FF 4E FE 0B C0  74 4F 83 FE FF 74 4A 8B   .F..N... tO...tJ.
57D0:  DE B1 03 D3 FB 8D 46 C8  03 D8 36 8A 07 32 46 B6   ......F. ..6..2F.
57E0:  98 BA 01 00 8B CE 8B D9  80 E1 07 D3 E2 85 C2 74   ........ .......t
57F0:  28 80 7E EE 00 75 0E 8B  C6 C4 5E F8 FF 46 F8 26   (.~..u.. ..^..F.&
5800:  88 07 EB 05 90 FF 86 54  FE FF 46 E8 FF 76 08 FF   .......T ..F..v..
5810:  76 06 E8 C6 04 8B F0 EB  A1 FF 4E E8 56 FF 76 08   v....... ..N.V.v.
5820:  FF 76 06 E8 E7 04 8B 46  F8 8B 56 FA 39 86 54 FE   .v.....F ..V.9.T.
5830:  75 09 39 96 56 FE 75 03  E9 64 04 80 7E EE 00 74   u.9.V.u. .d..~..t
5840:  03 E9 2B 04 FF 46 C6 83  FF 63 75 03 E9 20 04 8E   ..+..F.. .cu.. ..
5850:  C2 8B D8 26 C6 07 00 E9  15 04 90 BF 64 00 83 FE   ...&.... ....d...
5860:  2D 75 06 FE 46 F2 EB 06  90 83 FE 2B 75 1F FF 4E   -u..F... ...+u..N
5870:  FE 75 0C 83 7E BA 00 74  06 FE 86 52 FE EB 0E FF   .u..~..t ...R....
5880:  46 E8 FF 76 08 FF 76 06  E8 50 04 8B F0 83 FE 30   F..v..v. .P.....0
5890:  74 03 E9 57 01 FF 46 E8  FF 76 08 FF 76 06 E8 3A   t..W..F. .v..v..:
58A0:  04 8B F0 3C 78 74 04 3C  58 75 14 FF 46 E8 FF 76   ...<xt.< Xu..F..v
58B0:  08 FF 76 06 E8 24 04 8B  F0 BF 78 00 E9 2D 01 FF   ..v..$.. ..x..-..
58C0:  46 EA 83 FF 78 74 06 BF  6F 00 E9 1F 01 FF 4E E8   F...xt.. o.....N.
58D0:  56 FF 76 08 FF 76 06 E8  33 04 BE 30 00 E9 0C 01   V.v..v.. 3..0....
58E0:  90 80 7E FC 00 75 06 FE  46 F6 BF 46 00 83 FE 2D   ..~..u.. F..F...-
58F0:  75 05 FE 46 F2 EB 08 83  FE 2B 74 03 E9 ED 00 FF   u..F.... .+t.....
5900:  4E FE 74 03 E9 95 00 83  7E BA 00 75 03 E9 8C 00   N.t..... ~..u....
5910:  FE 86 52 FE E9 D5 00 83  FF 78 74 0D 83 FF 70 74   ..R..... .xt...pt
5920:  08 83 FF 46 74 03 E9 84  00 F6 84 A3 0A 80 74 15   ...Ft... ......t.
5930:  B0 04 50 8D 46 C2 16 50  9A 7A 33 35 04 56 E8 7C   ..P.F..P .z35.V.|
5940:  03 8B F0 EB 35 83 FF 46  75 2C 83 7E EA 00 74 26   ....5..F u,.~..t&
5950:  83 FE 3A 75 1C 8B 46 C2  89 46 EC 2B C0 89 46 C4   ..:u..F. .F.+..F.
5960:  89 46 C2 C7 46 EA FF FF  BF 70 00 BE 30 00 EB 0A   .F..F... .p..0...
5970:  90 C7 46 EA 00 00 FE 86  52 FE 80 BE 52 FE 00 75   ..F..... R...R..u
5980:  5E FF 46 EA 8D 44 D0 99  01 46 C2 11 56 C4 83 7E   ^.F..D.. .F..V..~
5990:  BA 00 74 08 FF 4E FE 75  03 E9 74 FF FF 46 E8 FF   ..t..N.u ..t..F..
59A0:  76 08 FF 76 06 E8 33 03  8B F0 EB 40 90 F6 84 A3   v..v..3. ...@....
59B0:  0A 04 74 C2 83 FF 6F 75  14 83 FE 38 7D B8 B0 03   ..t...ou ...8}...
59C0:  50 8D 46 C2 16 50 9A 7A  33 35 04 EB AD B8 0A 00   P.F..P.z 35......
59D0:  99 52 50 8D 46 C2 16 50  9A 58 33 35 04 EB 9B FF   .RP.F..P .X35....
59E0:  4E E8 56 FF 76 08 FF 76  06 E8 21 03 80 BE 52 FE   N.V.v..v ..!...R.
59F0:  00 75 03 E9 21 FF 83 FF  70 75 0F 80 7E F6 00 74   .u..!... pu..~..t
5A00:  09 8B 46 EC 8B 4E C2 89  46 C4 80 7E F2 00 74 0A   ..F..N.. F..~..t.
5A10:  F7 5E C2 83 56 C4 00 F7  5E C4 83 FF 46 75 05 C7   .^..V... ^...Fu..
5A20:  46 EA 00 00 83 7E EA 00  75 03 E9 72 02 80 7E EE   F....~.. u..r..~.
5A30:  00 74 03 E9 39 02 FF 46  C6 80 7E F6 00 74 14 8B   .t..9..F ..~..t..
5A40:  46 C2 8B 56 C4 C4 5E F8  26 89 07 26 89 57 02 E9   F..V..^. &..&.W..
5A50:  1D 02 90 8B 46 C2 C4 5E  F8 26 89 07 E9 10 02 8B   ....F..^ .&......
5A60:  46 E8 99 89 46 C2 89 56  C4 EB CE 8D 86 58 FE 89   F...F..V .....X..
5A70:  46 BC 8C 56 BE 83 FE 2D  75 13 8B D8 36 C6 07 2D   F..V...- u...6..-
5A80:  8D 86 59 FE 89 46 BC 8C  56 BE EB 06 90 83 FE 2B   ..Y..F.. V......+
5A90:  75 11 FF 4E FE FF 46 E8  FF 76 08 FF 76 06 E8 3A   u..N..F. .v..v..:
5AA0:  02 8B F0 83 7E BA 00 74  07 81 7E FE 5D 01 7E 2D   ....~..t ..~.].~-
5AB0:  C7 46 FE 5D 01 EB 26 8B  46 FE FF 4E FE 0B C0 74   .F.]..&. F..N...t
5AC0:  23 FF 46 EA 8B C6 C4 5E  BC FF 46 BC 26 88 07 FF   #.F....^ ..F.&...
5AD0:  46 E8 FF 76 08 FF 76 06  E8 00 02 8B F0 F6 84 A3   F..v..v. ........
```

```
5AE0:  0A 04 75 D3 83 FE 2E 75  43 8B 46 FE FF 4E FE 0B   ..u....u C.F..N..
5AF0:  C0 74 39 C4 5E BC FF 46  BC 26 C6 07 2E EB 18 8B   .t9.^..F .&......
5B00:  46 FE FF 4E FE 0B C0 74  23 FF 46 EA 8B C6 C4 5E   F..N...t #.F....^
5B10:  BC FF 46 BC 26 88 07 FF  46 E8 FF 76 08 FF 76 06   ..F.&... F..v..v.
5B20:  E8 B8 01 8B F0 F6 84 A3  0A 04 75 D3 83 7E EA 00   ........ ..u..~..
5B30:  75 03 E9 81 00 8B C6 3C  65 74 04 3C 45 75 77 8B   u......< et.<Euw.
5B40:  46 FE FF 4E FE 0B C0 74  6D C4 5E BC FF 46 BC 26   F..N...t m.^..F.&
5B50:  C6 07 65 FF 46 E8 FF 76  08 FF 76 06 E8 7C 01 8B   ..e.F..v ..v..|..
5B60:  F0 83 FE 2D 75 0F C4 5E  BC FF 46 BC 26 C6 07 2D   ...-u..^ ..F.&..-
5B70:  EB 08 90 90 90 83 FE 2B  75 35 8B 46 FE FF 4E FE   .......+ u5.F..N.
5B80:  0B C0 75 1D FF 46 FE EB  26 8B 46 FE FF 4E FE 0B   ..u..F.. &.F..N..
5B90:  C0 74 23 FF 46 EA 8B C6  C4 5E BC FF 46 BC 26 88   .t#.F... .^..F.&.
5BA0:  07 FF 46 E8 FF 76 08 FF  76 06 E8 2E 01 8B F0 F6   ..F..v.. v.......
5BB0:  84 A3 0A 04 75 D3 FF 4E  E8 56 FF 76 08 FF 76 06   ....u..N .V.v..v.
5BC0:  E8 4A 01 83 7E EA 00 75  03 E9 D3 00 80 7E EE 00   .J..~..u .....~..
5BD0:  74 03 E9 9A 00 FF 46 C6  C4 5E BC 26 C6 07 00 8D   t.....F. .^.&....
5BE0:  86 58 FE 16 50 FF 76 FA  FF 76 F8 8A 46 F6 98 50   .X..P.v. .v..F..P
5BF0:  8E 06 6E 0D 26 FF 1E 8C  0A 83 C4 0A EB 71 90 C4   ..n.&... .....q..
5C00:  5E 0A 26 8A 07 2A E4 3B  C6 74 12 FF 4E E8 56 FF   ^.&..*.; .t..N.V.
5C10:  76 08 FF 76 06 E8 F5 00  E9 84 00 90 90 FE 4E B8   v..v.... ......N.
5C20:  80 7E EE 00 75 49 83 6E  0E 04 EB 43 90 2D 63 00   .~..uI.n ...C.-c.
5C30:  3D 18 00 77 CA D1 E0 93  2E FF A7 FA 16 3A 11 AA   =..w.... .....:..
5C40:  13 28 15 28 15 28 15 BC  16 18 13 BC 16 BC 16 BC   .(.(.(.. ........
5C50:  16 BC 16 1C 15 AA 13 9E  13 BC 16 BC 16 50 11 BC   ........ .....P..
5C60:  16 AA 13 BC 16 BC 16 1B  13 BC 16 BC 16 58 11 FE   ........ .....X..
5C70:  46 B8 FF 46 0A EB 20 FF  46 E8 FF 76 08 FF 76 06   F..F.. . F..v..v.
5C80:  E8 58 00 8B F0 C4 5E 0A  FF 46 0A 26 8A 07 2A E4   .X....^. .F.&..*.
5C90:  3B F0 74 03 E9 74 FF 83  FE FF 74 03 E9 85 F8 83   ;.t..t.. ..t.....
5CA0:  FE FF 75 0C 83 7E C6 00  75 06 80 7E B8 00 74 05   ..u..~.. u..~..t.
5CB0:  8B 46 C6 EB 02 8B C6 5E  5F 8B E5 5D CB 55 8B EC   .F.....^ _..].U..
5CC0:  8B 5E 04 F6 87 A3 0A 04  74 05 8B C3 EB 08 90 8B   .^...... t.......
5CD0:  C3 24 DF 2D 07 00 5D C2  02 00 90 55 8B EC 83 EC   .$.-..]. ...U....
5CE0:  04 C4 5E 04 26 FF 4F 04  78 15 26 8B 07 26 8B 57   ..^.&.O. x.&..&.W
5CF0:  02 26 FF 07 8B D8 8E C2  26 8A 07 2A E4 EB 07 06   .&...... &..*....
5D00:  53 9A 26 0B 35 04 8B E5  5D C2 04 00 90 55 8B EC   S.&.5... ]....U..
5D10:  83 7E 08 FF 74 0E FF 76  06 FF 76 04 FF 76 08 9A   .~..t..v ..v..v..
5D20:  AE 1D 35 04 8B E5 5D C2  06 00 90 55 8B EC 56 C4   ..5...]. ...U..V.
5D30:  5E 08 26 FF 07 FF 76 06  FF 76 04 E8 9D FF 8B F0   ^.&...v. .v......
5D40:  F6 84 A3 0A 08 75 E8 5E  8B E5 5D C2 08 00 90 74   .....u.^ ..]....t
5D50:  18 7F 18 95 18 C9 18 F5  18 FD 18 26 19 58 19 55   ........ ...&.X.U
5D60:  8B EC B8 71 01 0E E8 A4  EA 56 57 33 C0 89 46 F8   ...q.... .VW3..F.
5D70:  88 46 FB C4 76 0A 26 AC  89 76 0A 88 46 FE 0A C0   .F..v.&. .v..F...
5D80:  74 06 83 7E F8 00 7D 06  8B 46 F8 E9 B5 04 BB 10   t..~..}. .F......
5D90:  0A 2C 20 3C 58 77 05 D7  24 0F EB 02 B0 00 B1 03   ., <Xw.. $.......
5DA0:  D2 E0 02 46 FB D7 FE C1  D2 E8 88 46 FB 98 8B D8   ...F.... ...F....
5DB0:  D1 E3 2E FF A7 0C 18 8A  56 FE B9 01 00 E8 36 04   ........ V.....6.
5DC0:  EB B1 33 C0 89 46 F0 89  46 F6 89 46 EE C7 46 FC   ..3..F.. F..F..F.
5DD0:  20 00 48 89 46 F4 EB 9B  8A 46 FE 3C 2D 75 06 80    .H.F... .F.<-u..
5DE0:  4E FC 04 EB 8E 3C 2B 75  06 80 4E FC 01 EB 84 3C   N....<+u ..N....<
5DF0:  20 75 07 80 4E FC 02 E9  79 FF 3C 23 75 07 80 4E    u..N... y.<#u..N
5E00:  FC 80 E9 6E FF 80 4E FC  08 E9 67 FF 8A 4E FE 80   ...n..N. ..g..N..
5E10:  F9 2A 75 0F E8 5C 03 0B  C0 79 17 F7 D8 80 4E FC   .*u..\.. .y....N.
5E20:  04 EB 0F 80 E9 30 32 ED  8B 46 F6 BB 0A 00 F7 E3   .....02. .F......
5E30:  03 C1 89 46 F6 E9 3B FF  C7 46 F4 00 00 E9 33 FF   ...F..;. .F....3.
```

SAMPLE.DMP Thursday, January 6, 1994 12:01pm Page 29

```
5E40:  8A 4E FE 80 F9 2A 75 0C  E8 28 03 0B C0 79 14 B8   .N...*u. .(...y..
5E50:  FF FF EB 0F 80 E9 30 32  ED 8B 46 F4 BB 0A 00 F7   ......02 ..F.....
5E60:  E3 03 C1 89 46 F4 E9 0A  FF 8A 46 FE 3C 6C 75 06   ....F... ..F.<lu.
5E70:  80 4E FC 10 EB 22 3C 46  75 06 80 4E FC 20 EB 18   .N..."<F u..N. ..
5E80:  3C 4E 75 06 80 4E FD 10  EB 0E 3C 4C 75 06 80 4E   <Nu..N.. ..<Lu..N
5E90:  FD 04 EB 04 80 4E FD 08  E9 D8 FE 8A 46 FE 3C 64   .....N.. ....F.<d
5EA0:  75 03 E9 94 01 3C 69 75  03 E9 8D 01 3C 75 75 03   u....<iu ....<uu.
5EB0:  E9 8A 01 3C 58 75 03 E9  89 01 3C 78 75 03 E9 88   ...<Xu.. ..<xu...
5EC0:  01 3C 6F 75 03 E9 A2 01  3C 63 74 1A 3C 73 74 27   .<ou.... <ct.<st'
5ED0:  3C 6E 74 51 3C 70 74 60  3C 45 74 07 3C 47 74 03   <ntQ<pt` <Et.<Gt.
5EE0:  E9 BB 00 E9 B5 00 E8 8A  02 8D BE 8F FE 16 07 AA   ........ ........
5EF0:  4F B9 01 00 E9 F1 01 E8  90 02 0B FF 75 12 8C C0   O....... ....u...
5F00:  0B C0 75 0C 1E 07 BF 69  0A 8B 0E 6F 0A E9 D8 01   ..u....i ...o....
5F10:  57 8B 4E F4 E3 07 32 C0  F2 AE 75 01 4F 59 2B F9   W.N...2. ..u.OY+.
5F20:  87 CF E9 C3 01 E8 62 02  8B 46 F8 AB F6 46 FC 10   ......b. .F...F..
5F30:  74 03 33 C0 AB E9 3B FE  F6 46 FC 30 75 05 E8 32   t.3...;. .F.0u..2
5F40:  02 EB 39 E8 36 02 F6 46  FD 18 75 30 C6 46 FF 07   ..9.6..F ..u0.F..
5F50:  B9 10 00 16 07 52 33 D2  8D BE 97 FE BE 04 00 E8   .....R3. ........
5F60:  B0 02 B9 10 00 8D BE 92  FE 58 33 D2 BE 04 00 E8   ........ .X3.....
5F70:  A0 02 C6 86 93 FE 3A B9  09 00 EB 18 C6 46 FF 07   ......:. .....F..
5F80:  B9 10 00 16 07 33 D2 8D  BE 92 FE BE 04 00 E8 81   .....3.. ........
5F90:  02 B9 04 00 8D BE 8F FE  E9 4D 01 FF 46 EE 80 4E   ........ .M._F..N
5FA0:  FC 40 8A 46 FE 0C 20 98  8B F0 83 7E F4 00 7F 13   .@.F.. . ...¯....
5FB0:  74 07 C7 46 F4 06 00 EB  0A 3D 67 00 75 05 C7 46   t..F.... .=g.u..F
5FC0:  F4 01 00 8D BE 8F FE FF  76 EE FF 76 F4 56 16 57   ........ v..v.V.W
5FD0:  FF 76 10 FF 76 0E F6 46  FD 04 74 0A FF 1E 98 0A   .v..v..F ..t.....
5FE0:  83 46 0E 0A EB 08 FF 1E  84 0A 83 46 0E 08 83 C4   .F...... _..F....
5FF0:  0E F6 46 FC 80 74 0F 83  7E F4 00 75 09 16 57 FF   ..F..t.. ¯..u..W.
6000:  1E 90 0A 83 C4 04 83 FE  67 75 10 F7 46 FC 80 00   ........ gu..F...
6010:  75 09 16 57 FF 1E 88 0A  83 C4 04 16 07 26 80 3D   u..W.... .....&.=
6020:  2D 75 05 47 80 4E FD 01  B9 FF FF 57 B0 00 F2 AE   -u.G.N.. ...W....
6030:  4F 59 2B F9 87 CF E9 AF  00 80 4E FC 40 C6 46 FA   OY+..... ..N.@.F.
6040:  0A EB 35 C6 46 FF 07 EB  04 C6 46 FF 27 F6 46 FC   ..5.F... ..F.'.F.
6050:  80 74 11 C7 46 F0 02 00  C6 46 F2 30 B2 51 02 56   .t..F... .F.0.Q.V
6060:  FF 88 56 F3 C6 46 FA 10  EB 0E F6 46 FC 80 74 04   ..V..F.. ...F..t.
6070:  80 4E FD 02 C6 46 FA 08  F6 46 FC 10 74 05 E8 FB   .N...F.. .F..t...
6080:  00 EB 0E E8 ED 00 F6 46  FC 40 74 03 99 EB 02 33   .......F .@t....3
6090:  D2 F6 46 FC 40 74 0F 0B  D2 7D 0B 80 4E FD 01 F7   ..F.@t._ .}..N...
60A0:  D8 83 D2 00 F7 DA 83 7E  F4 00 7D 07 C7 46 F4 01   .......¯ ..}..F..
60B0:  00 EB 04 80 66 FC F7 8B  D8 0B DA 75 05 C7 46 F0   ...._f... ...u..F.
60C0:  00 00 8D 7E EB 16 07 8A  4E FA 32 ED 8B 76 F4 E8   ...¯.... N.2..v..
60D0:  40 01 F6 46 FD 02 74 0E  E3 06 26 80 3D 30 74 06   @..F..t. ..&.=0t.
60E0:  4F 26 C6 05 30 41 EB 00  F6 46 FC 40 74 31 F6 46   O&..0A.. .F.@t1.F
60F0:  FD 01 74 0B C6 46 F2 2D  C7 46 F0 01 00 EB 20 F6   ..t..F.- .F.... .
6100:  46 FC 01 74 0B C6 46 F2  2B C7 46 F0 01 00 EB 0F   F..t..F. +.F.....
6110:  F6 46 FC 02 74 09 C6 46  F2 20 C7 46 F0 01 00 8B   .F..t..F . .F....
6120:  46 F6 2B C1 2B 46 F0 7D  02 33 C0 06 57 51 F6 46   F.+.+F.} .3..WQ.F
6130:  FC 0C 75 07 8B C8 B2 20  E8 BB 00 50 16 07 8D 7E   ..u....  ...P...¯
6140:  F2 8B 4E F0 E8 91 00 58  F6 46 FC 08 74 0D F6 46   ..N....X .F..t..F
6150:  FC 04 75 07 8B C8 B2 30  E8 9B 00 59 5F 07 50 E8   ..u....0 ...Y_.P.
6160:  76 00 58 F6 46 FC 04 74  07 8B C8 B2 20 E8 86 00   v.X.F..t .... ...
6170:  E9 00 FC C4 76 0E 26 AD  89 76 0E C3 C4 76 0E 26   ....v.&. .v...v.&
6180:  AD 8B D0 26 AD 92 89 76  0E C3 F6 46 FC 20 74 08   ...&...v ...F. t.
6190:  E8 E9 FF 8E C2 8B F8 C3  E8 D8 FF 8B F8 0B C0 75   ........ .......u
```

SAMPLE.DMP Thursday, January 6, 1994 12:01pm Page 30

```
61A0:  03 8E C0 C3 1E 07 C3 98  06 57 C4 5E 06 26 FF 4F   ........ .W.^.&.O
61B0:  04 78 10 26 8B 3F 26 FF  07 26 8E 47 02 AA 33 C0   .x.&.?&. .&.G..3.
61C0:  5F 07 C3 51 52 06 53 50  0E E8 39 EF 83 C4 06 5A   _..QR.SP ..9....Z
61D0:  59 3D FF FF 75 E8 EB E8  E3 1B 8B F7 01 4E F8 57   Y=..u... .....N.W
61E0:  33 FF 26 AC E8 C0 FF 0B  F8 E2 F7 0B FF 5F 74 05   3.&..... ....._t.
61F0:  C7 46 F8 FF FF C3 E3 19  01 4E F8 57 33 FF 8A C2   .F...... .N.W3...
6200:  E8 A4 FF 0B F8 E2 F7 0B  FF 5F 74 05 C7 46 F8 FF   ........ ._t..F..
6210:  FF C3 FD 57 93 0B F6 7F  0A 0B DB 75 06 0B D2 75   ...W.... ...u...u
6220:  02 EB 1A 92 33 D2 F7 F1  93 F7 F1 92 87 D3 04 30   ....3... .......0
6230:  3C 39 76 03 02 46 FF AA  8B C2 4E EB D8 59 2B CF   <9v..F.. ..N..Y+.
6240:  47 FC C3 5F 5E 8B E5 5D  CB 55 8B EC 83 EC 04 56   G.._^..] .U.....V
6250:  BE 18 08 2B C0 89 46 FE  89 46 FC EB 03 83 C6 0C   ...+..F. .F......
6260:  39 36 F8 09 72 26 F6 44  0A 83 75 F1 C7 44 04 00   96..r&.D ..u..D..
6270:  00 C6 44 0A 00 2B C0 89  44 08 89 44 06 89 44 02   ..D..+.. D..D..D.
6280:  89 04 C6 44 0B FF 89 76  FC 8C 5E FE 8B 46 FC 8B   ...D...v ..^..F..
6290:  56 FE 5E 8B E5 5D CB 55  8B EC BB 24 08 EB 06 55   V.^..].U ...$...U
62A0:  8B EC 8B 5E 08 FF 4F 04  78 0F FF 07 C4 1F 8A 46   ...^..O. x......F
62B0:  06 26 88 47 FF 32 E4 EB  0C 1E 53 FF 76 06 0E E8   .&.G.2.. ..S.v...
62C0:  43 EE 83 C4 06 5D CB 55  8B EC BB 18 08 EB 06 55   C....].U .......U
62D0:  8B EC 8B 5E 06 FF 4F 04  78 0C FF 07 C4 1F 26 8A   ...^..O. x.....&.
62E0:  47 FF 32 E4 EB 08 1E 53  0E E8 7D ED 5B 5B 5D CB   G.2....S ..}.[[].
62F0:  00 55 8B EC 57 56 8B 76  06 8B 7E 08 83 FE FF 74   .U..WV.v ..~....t
6300:  12 F6 45 0A 01 75 12 F6  45 0A 80 74 06 F6 45 0A   ..E..u.. E..t..E.
6310:  02 74 06 B8 FF FF EB 3E  90 8B 45 08 0B 45 06 75   .t.....> ..E..E.u
6320:  08 1E 57 E8 03 EF 83 C4  04 8B 05 8B 55 02 39 45   ..W..... ....U.9E
6330:  06 75 0D 39 55 08 75 08  83 7D 04 00 75 D5 FF 05   .u.9U.u. .}..u...
6340:  FF 45 04 8B C6 FF 0D C4  1D 26 88 07 80 65 0A EF   .E...... .&...e..
6350:  80 4D 0A 01 2A E4 5E 5F  8B E5 5D CB 90 55 8B EC   .M..*.^_ ..]..U..
6360:  8B 5E 06 3B 1E C3 07 72  06 B8 00 09 F9 EB 0B B4   .^.;...r ........
6370:  3E CD 21 72 05 C6 87 C5  07 00 E9 AE E7 55 8B EC   >.!r.... .....U..
6380:  83 EC 04 8B 5E 06 3B 1E  C3 07 72 05 B8 00 09 EB   ....^.;. ..r.....
6390:  2A F7 46 0A 00 80 74 48  83 7E 0C 00 74 1A 33 C9   *.F...tH .~..t.3.
63A0:  8B D1 B8 01 42 CD 21 72  4B F7 46 0C 02 00 75 0E   ....B.!r K.F...u.
63B0:  03 46 08 13 56 0A 79 28  B8 00 16 F9 EB 36 89 56   .F..V.y( .....6.V
63C0:  FE 89 46 FC 8B D1 B8 02  42 CD 21 03 46 08 13 56   ..F..... B.!.F..V
63D0:  0A 79 0D 8B 4E FE 8B 56  FC B8 00 42 CD 21 EB D8   .y..N..V ...B.!..
63E0:  8B 56 08 8B 4E 0A 8A 46  0C B4 42 CD 21 72 05 80   .V..N..F ..B.!r..
63F0:  A7 C5 07 FD E9 49 E7 55  8B EC 83 EC 04 32 FF 80   .....I.U .....2..
6400:  3E BE 07 03 72 03 8A 7E  0C 8B 46 0E 89 46 0C EB   >...r..~ ..F..F..
6410:  08 55 8B EC 83 EC 04 32  FF 88 7E FE 8B 46 0A 8B   .U.....2 ..~..F..
6420:  C8 C6 46 FC 00 A9 00 80  75 10 A9 00 40 75 07 F6   ..F..... u...@u..
6430:  06 73 0A 80 75 04 C6 46  FC 80 1E C5 56 06 24 03   .s..u..F ....V.$.
6440:  0A C7 B4 3D CD 21 1F 73  12 3D 02 00 75 09 F7 C1   ...=.!.s .=..u...
6450:  00 01 74 03 E9 A5 00 F9  E9 E5 E6 93 8B C1 25 00   ..t..... ......%.
6460:  05 3D 00 05 75 09 B4 3E  CD 21 B8 00 11 EB E8 C6   .=..u..> .!......
6470:  46 FD 01 B8 00 44 CD 21  F6 C2 80 74 04 80 4E FC   F....D.! ...t..N.
6480:  40 F6 46 FC 40 74 03 E9  DF 00 8B 46 0A A9 00 02   @.F.@t.. ...F....
6490:  74 1E A9 03 00 74 09 33  C9 B4 40 CD 21 E9 C9 00   t....t.3 ..@.!...
64A0:  B4 3E CD 21 1E C5 56 06  B8 00 43 CD 21 1F EB 69   .>.!..V. ..C.!..i
64B0:  F6 46 FC 80 75 03 E9 B0  00 A9 02 00 75 03 E9 A8   .F..u... ....u...
64C0:  00 B9 FF FF 8B D1 B8 02  42 CD 21 F7 D9 1E 16 1F   ........ B.!.....
64D0:  8D 56 FF B4 3F CD 21 1F  0B C0 74 15 80 7E FF 1A   .V..?.!. ..t..~..
64E0:  75 0F F7 D9 8B D1 B8 02  42 CD 21 33 C9 B4 40 CD   u....... B.!3..@.
64F0:  21 33 C9 8B D1 B8 00 42  CD 21 EB 6D C6 46 FD 00   !3.....B .!.m.F..
```

```
6500:  8B 4E 0C E8 AC 00 89 4E  0C F6 46 FE FF 75 07 F7   .N.....N ..F..u..
6510:  46 0A 02 00 75 03 80 E1  FE 1E C5 56 06 B4 3C CD   F...u... ...V..<.
6520:  21 1F 73 03 E9 19 E6 93  F6 46 FE FF 75 07 F7 46   !.s..... .F..u..F
6530:  0A 02 00 75 34 B4 3E CD  21 8A 46 0A 24 03 0A 46   ...u4.>. !.F.$..F
6540:  FE 1E C5 56 06 B4 3D CD  21 1F 72 D8 93 F6 46 FD   ...V..=. !.r...F.
6550:  01 75 16 F7 46 0C 01 00  74 0F 80 C9 01 1E C5 56   .u..F... t......V
6560:  06 B8 01 43 CD 21 1F 72  BB F6 46 FC 40 75 3F 1E   ...C.!.r ..F.@u?.
6570:  C5 56 06 B8 00 43 CD 21  1F 8B C1 32 C9 25 01 00   .V...C.! ...2.%..
6580:  74 02 B1 10 F7 46 0A 08  00 74 03 80 C9 20 3B 1E   t....F.. .t... ;.
6590:  C3 07 72 0A B4 3E CD 21  B8 00 18 E9 B9 FE 0A 4E   ..r..>.! .......N
65A0:  FC 80 C9 01 88 8F C5 07  8B C3 8B E5 5D CB 32 C9   ........ ....].2.
65B0:  EB DC A1 B8 07 F7 D0 23  C1 33 C9 A8 80 75 03 80   .......# .3...u..
65C0:  C9 01 C3 55 8B EC 83 EC  02 8B 5E 06 3B 1E C3 07   ...U.... ..^.;...
65D0:  72 06 F9 B8 00 09 EB 73  33 C0 8B 4E 0C E3 6C F6   r......s 3..N..l.
65E0:  87 C5 07 02 75 65 81 3E  20 0D D6 D6 75 04 FF 16   ....ue.>  ...u...
65F0:  22 0D 8B 4E 0C 1E C5 56  08 B4 3F CD 21 1F 73 04   "..N...V ..?.!.s.
6600:  B4 09 EB 47 F6 87 C5 07  80 74 40 80 A7 C5 07 FB   ...G.... .t@.....
6610:  56 57 1E 07 8E 5E 0A FC  8B F2 8B FA 8B C8 E3 27   VW...^.. .......'
6620:  B4 0D 80 3C 0A 75 06 26  80 8F C5 07 04 AC 3A C4   ...<.u.& ......:.
6630:  74 1C 3C 1A 75 08 26 80  8F C5 07 02 EB 05 88 05   t.<.u.&. ........
6640:  47 E2 EA 8B C7 2B C2 06  1F 5F 5E E9 F2 E4 83 F9   G....+.. ._^.....
6650:  01 74 07 80 3C 0A 74 E9  EB E4 06 1F F6 87 C5 07   .t..<.t. ........
6660:  40 74 1C B8 00 44 CD 21  F7 C2 20 00 75 0D 1E 16   @t...D.! .. .u...
6670:  1F 8D 56 FF B4 3F CD 21  1F 72 CE B0 0A EB 30 1E   ..V..?.! .r....0.
6680:  16 1F C6 46 FF 00 8D 56  FF B4 3F CD 21 1F 72 B9   ...F...V ..?.!.r.
6690:  0B C0 74 19 83 7E 0C 01  74 1F B9 FF FF 8B D1 B8   ..t..~.. t.......
66A0:  01 42 CD 21 B9 01 00 80  7E FF 0A 74 07 B0 0D C5   .B.!.... ~..t....
66B0:  56 08 EB 8A C5 56 08 EB  88 80 7E FF 0A 75 DB EB   V....V.. ..~..u..
66C0:  BA 55 8B EC 83 EC 08 8B  5E 06 3B 1E C3 07 72 07   .U...... ^.;...r.
66D0:  B8 00 09 F9 E9 69 E4 81  3E 20 0D D6 D6 75 04 FF   .....i.. > ...u..
66E0:  16 22 0D F6 87 C5 07 20  74 0B B8 02 42 33 C9 8B   .".....  t...B3..
66F0:  D1 CD 21 72 DF F6 87 C5  07 80 74 7C 8C 5E FA 8E   ..!r.... ..t|.^..
6700:  46 0A C5 56 08 33 C0 89  46 FE 89 46 FC FC 57 56   F..V.3.. F..F..WV
6710:  8B FA 8B F2 89 66 F8 8B  4E 0C E3 3F B0 0A F2 AE   .....f.. N..?....
6720:  75 51 1E 8E 5E FA 9A DE  22 35 04 3D A8 00 76 4A   uQ..^... "5.=..vJ
6730:  1F 83 EC 02 8B DC BA 00  02 3D 28 02 73 03 BA 80   ........ .=(.s...
6740:  00 2B E2 8B D4 8B FA 16  07 8B 4E 0C AC 3C 0A 74   .+...... ..N..<.t
6750:  0C 3B FB 74 19 AA E2 F4  E8 26 00 EB 79 B0 0D 3B   .;.t.... .&..y..;
6760:  FB 75 03 E8 1B 00 AA B0  0A FF 46 FC EB E3 E8 10   .u...... ..F.....
6770:  00 EB E2 5E 5F 8E 5E FA  EB 6D B8 FC FF 0E E8 8C   ...^_.^. .m......
6780:  E0 50 53 51 1E 06 1F 8B  CF 2B CA E3 12 51 8B 5E   .PSQ.... .+...Q.^
6790:  06 B4 40 CD 21 59 72 0E  01 46 FE 3B C8 77 07 1F   ..@.!Yr. .F.;.w..
67A0:  59 5B 58 8B FA C3 9F 1F  83 C4 08 83 7E FE 00 75   Y[X..... ....~..u
67B0:  25 9E 73 04 B4 09 EB 24  8E 5E FA F6 87 C5 07 40   %.s....$ .^.....@
67C0:  74 0E 8E 5E 0A 8B 5E 08  80 3F 1A 75 03 F8 EB 0C   t..^..^. .?.u....
67D0:  F9 B8 00 1C EB 06 8B 46  FE 2B 46 FC 8B 66 F8 5E   .......F .+F..f.^
67E0:  5F 8E 5E FA E9 59 E3 8B  4E 0C 0B C9 75 05 8B C1   _.^..Y.. N...u...
67F0:  E9 4D E3 1E C5 56 08 B4  40 CD 21 1E 07 1F 73 04   .M...V.. @.!...s.
6800:  B4 09 EB E0 0B C0 75 DC  F6 87 C5 07 40 74 0B 8B   ......u. ....@t..
6810:  DA 26 80 3F 1A 75 03 F8  EB CA F9 B8 00 1C EB C4   .&.?.u.. ........
6820:  00 59 5A A1 F8 07 3B C4  73 07 2B C4 F7 D8 52 51   .YZ...;. s.+...RQ
6830:  CB 33 C0 EB F9 EA 11 23  35 04 00 EA FE 22 35 04   .3.....# 5...."5.
6840:  00 55 8B EC 56 C4 76 06  8C C1 E3 05 26 80 4C FE   .U..V.v. ....&.L.
6850:  01 5E 5D CB 55 8B EC 56  57 8B 4E 06 83 F9 E8 77   .^].U..V W.N....w
```

```
6860:  69 1E A1 76 0A 0B C0 74  48 BF F8 23 8B 36 7E 0A   i..v...t H..#.6~.
6870:  C5 1E 78 0A 1E 56 57 FF  D7 5F 5E 73 2B 8C DA C5   ..x..VW. ._^s+...
6880:  5F 0C 3B D6 75 EF 58 1F  1E C4 36 78 0A 26 8B 74   _.;.u.X. ..6x.&.t
6890:  12 C5 1E 74 0A 8C DA 3B  D0 75 D9 1F 1E 81 FF 74   ...t...; .u.....t
68A0:  24 74 0E BF 74 24 EB C4  5E 81 FF F8 23 74 0F EB   $t..t$.. ^...#t..
68B0:  0A 07 06 BF 74 0A E8 FE  01 72 0E E8 7D 00 1F 89   ....t... .r..}...
68C0:  16 7A 0A 89 1E 78 0A EB  04 1F 33 C0 99 5F 5E 5D   .z...x.. ..3.._^]
68D0:  CB 06 57 8B F8 03 FB 89  7F 04 4F 4F 2D 16 00 8D   ..W..... ..OO-...
68E0:  77 14 C7 05 FE FF 89 7F  0A 48 89 04 8C 1F 8B C6   w....... .H......
68F0:  8C DA 8E C2 8D 7F 06 FC  AB AB 47 47 33 C0 AB AB   ........ ..GG3...
6900:  AB AB 5F 07 C3 26 8B 45  02 0B C0 75 09 26 8C 5D   .._..&.E ...u.&.]
6910:  02 26 89 1D EB 14 06 26  C4 75 08 26 8C 5C 0E 26   .&.....& .u.&.\.&
6920:  89 5C 0C 8C 47 12 89 77  10 07 26 8C 5D 0A 26 89   .\..G..w ..&.].&.
6930:  5D 08 26 8C 5D 06 26 89  5D 04 C3 41 80 E1 FE 53   ].&.].&. ]..A...S
6940:  FC 8B 77 08 8B 5F 0A 33  FF EB 23 8B C3 5B A8 01   ..w.._.3 ..#..[..
6950:  75 42 53 8B 77 06 8B 5F  08 3B DE 74 36 4B 33 FF   uBS.w.._ .;.t6K3.
6960:  EB 0C 90 8D 54 FE 3B D3  73 E1 03 F0 72 23 AD A8   ....T.;. s...r#..
6970:  01 74 F0 8B FE 48 3B C1  73 23 03 F0 72 13 8B D0   .t...H;. s#..r...
6980:  AD A8 01 74 DE 03 C2 05  02 00 8B F7 89 44 FE EB   ...t.... .....D..
6990:  E4 8B C0 5B 8B 47 06 89  47 08 F9 EB 19 5B 89 4C   ...[.G.. G....[.L
69A0:  FE 74 09 03 F9 2B C1 48  89 05 2B F9 03 F9 89 7F   .t...+.H ..+.....
69B0:  08 8B C6 8C DA F8 C3 51  57 F6 47 02 01 74 66 E8   .......Q W.G..tf.
69C0:  D5 00 8B FE 8B 04 A8 01  74 03 2B C8 49 41 41 8B   ........ t.+.IAA.
69D0:  77 04 0B F6 74 4F 03 CE  73 09 33 C0 BA F0 FF E3   w...tO.. s.3.....
69E0:  33 EB 42 B8 80 18 8E C0  26 A1 82 0A 3D 00 20 74   3.B..... &...=. t
69F0:  16 BA 00 80 3B D0 72 06  D1 EA 75 F8 EB 22 83 FA   ....;.r. ..u.."..
6A00:  08 72 1D D1 E2 8B C2 48  8B D0 03 C1 73 02 33 C0   .r.....H ....s.3.
6A10:  F7 D2 23 C2 52 E8 2E 00  5A 73 0D 83 FA F0 74 05   ..#.R... Zs....t.
6A20:  B8 10 00 EB E2 F9 EB 1B  8B D0 2B 57 04 89 47 04   ........ ..+W..G.
6A30:  89 7F 08 8B 77 0A 4A 89  14 42 03 F2 C7 04 FE FF   ....w.J. .B......
6A40:  89 77 0A 5F 59 C3 8B D0  F6 47 02 04 74 0F 4A 8B   .w._Y... .G..t.J.
6A50:  77 04 4E 3B D6 72 05 39  57 FE 73 36 42 53 51 8C   w.N;.r.9 W.s6BSQ.
6A60:  DE 8E C6 B1 04 D3 E8 75  03 B8 00 10 F6 47 02 04   .......u .....G..
6A70:  74 0A 03 C6 8B 1E BC 07  2B C3 8E C3 8B D8 B4 4A   t....... +......J
6A80:  CD 21 59 5B 72 10 8B C2  F6 47 02 04 74 04 4A 89   .!Y[r... .G..t.J.
6A90:  57 FE F8 EB 01 F9 C3 57  8B 77 08 3B 77 0A 75 03   W......W .w.;w.u.
6AA0:  8B 77 06 AD 3D FE FF 74  08 8B FE 24 FE 03 F0 EB   .w..=..t ...$....
6AB0:  F2 4F 4F 8B F7 5F C3 8B  D1 83 C2 27 80 E2 F0 8B   .OO.._.. ...'....
6AC0:  DA F7 DB F7 DB F5 D1 DB  D1 EB D1 EB D1 EB B4 48   ........ .......H
6AD0:  CD 21 72 26 3B 06 98 07  76 F4 3B 06 96 07 76 03   .!r&;... v.;...v.
6AE0:  A3 96 07 8E D8 33 DB 26  8B 45 0C 89 47 02 8B C2   .....3.& .E..G...
6AF0:  E8 DE FD E8 0F FE F8 EB  01 F9 C3 55 8B EC 8B D7   ........ ...U....
6B00:  8B DE 1E C4 7E 06 33 C0  B9 FF FF F2 AE 8D 75 FF   ....~.3. ......u.
6B10:  C4 7E 0A B9 FF FF F2 AE  F7 D1 2B F9 8C C0 8E D8   .~...... ..+.....
6B20:  8E 46 08 87 FE 8B 46 06  F7 C6 01 00 74 02 A4 49   .F....F. ....t..I
6B30:  D1 E9 F3 A5 13 C9 F3 A4  8B F3 8B FA 1F 8C C2 5D   ........ .......]
6B40:  CB 55 8B EC 8B D7 8B DE  1E C5 76 0A 8B FE 8C D8   .U...... ..v.....
6B50:  8E C0 33 C0 B9 FF FF F2  AE F7 D1 C4 7E 06 8B C7   ..3..... ....~...
6B60:  A8 01 74 02 A4 49 D1 E9  F3 A5 13 C9 F3 A4 8B F3   ..t..I.. ........
6B70:  8B FA 1F 8C C2 5D CB 55  8B EC 8B D7 8B DE 1E C5   .....].U ........
6B80:  76 06 C4 7E 0A 33 C0 B9  FF FF F2 AE F7 D1 2B F9   v..~.3.. ......+.
6B90:  F3 A6 74 05 1B C0 1D FF  FF 1F 8B F3 8B FA 5D CB   ..t..... ......].
6BA0:  00 55 8B EC 8B D7 C4 7E  06 33 C0 B9 FF FF F2 AE   .U.....~ .3......
6BB0:  F7 D1 49 91 8B FA 5D CB  00 55 8B EC 57 56 1E C4   ..I...]. .U..WV..
```

```
6BC0:  7E 06 C5 76 0A 8B DF 8B  4E 0E E3 0C AC 0A C0 74   ~..v.... N......t
6BD0:  03 AA E2 F8 32 C0 F3 AA  8B C3 8C C2 1F 5E 5F 8B   ....2... .....^_.
6BE0:  E5 5D CB 55 8B EC 57 56  1E 8B 4E 0E E3 27 8B D9   .].U..WV ..N..'..
6BF0:  C4 7E 06 8B F7 33 C0 F2  AE F7 D9 03 CB 8B FE C5   .~...3.. ........
6C00:  76 0A F3 A6 8A 44 FF 33  C9 26 3A 45 FF 77 04 74   v....D.3 .&:E.w.t
6C10:  04 49 49 F7 D1 8B C1 1F  5E 5F 8B E5 5D CB 00 E9   .II..... ^_..]...
6C20:  59 00 00 55 8B EC 57 56  EB 04 90 FF 46 06 C4 5E   Y..U..WV ....F..^
6C30:  06 26 8A 07 98 8B D8 F6  87 A3 0A 08 75 ED 2B C0   .&...... ....u.+.
6C40:  50 50 06 FF 76 06 9A 5E  26 35 04 83 C4 04 50 FF   PP..v..^ &5....P.
6C50:  76 08 FF 76 06 9A 36 4B  35 04 83 C4 0A 05 08 00   v..v..6K 5.......
6C60:  BB E8 13 8B FB 8B F0 1E  07 1E 8E DA A5 A5 A5 A5   ........ ........
6C70:  1F 8B C3 8C DA 5E 5F 8B  E5 5D CB 55 8B EC 57 56   .....^_. .].U..WV
6C80:  1E C5 76 06 33 C0 99 33  DB AC 3C 20 74 FB 3C 09   ..v.3..3 ..< t.<.
6C90:  74 F7 50 3C 2D 74 04 3C  2B 75 01 AC 3C 39 77 1F   t.P<-t.< +u..<9w.
6CA0:  2C 30 72 1B D1 E3 D1 D2  8B CB 8B FA D1 E3 D1 D2   ,0r..... ........
6CB0:  D1 E3 D1 D2 03 D9 13 D7  03 D8 83 D2 00 EB DC 58   ........ .......X
6CC0:  3C 2D 93 75 07 F7 D8 83  D2 00 F7 DA 1F 5E 5F 5D   <-.u.... .....^_]
6CD0:  CB 55 8B EC 56 57 B3 01  8B 4E 0C 8B 46 06 33 D2   .U..VW.. .N..F.3.
6CE0:  83 F9 0A 75 01 99 1E C5  7E 08 E9 C3 0A 55 8B EC   ...u.... ~....U..
6CF0:  83 EC 08 C4 5E 0C 26 8B  47 06 26 8B 57 08 89 46   ....^.&. G.&.W..F
6D00:  F8 89 56 FA C4 5E 06 26  C6 07 30 8D 47 01 89 46   ..V..^.& ..0.G..F
6D10:  FC 8C 46 FE EB 26 90 C4  5E F8 26 80 3F 00 74 0F   ..F..&.. ^.&.?.t.
6D20:  26 8A 07 C4 5E FC 26 88  07 FF 46 F8 EB 08 90 C4   &...^.&. ..F.....
6D30:  5E FC 26 C6 07 30 FF 46  FC FF 4E 0A 83 7E 0A 00   ^.&..0.F ..N..~..
6D40:  7F D5 C4 5E FC 26 C6 07  00 83 7E 0A 00 7C 1F C4   ...^.&.. ..~..|..
6D50:  5E F8 26 80 3F 35 7C 16  EB 05 90 26 C6 07 30 FF   ^.&.?5|. ...&..0.
6D60:  4E FC C4 5E FC 26 80 3F  39 74 F0 26 FE 07 C4 5E   N..^.&.? 9t.&...^
6D70:  06 26 80 3F 31 75 0A C4  5E 0C 26 FF 47 02 EB 0F   .&.?1u.. ^.&.G...
6D80:  90 8B C3 8C C2 40 52 50  52 53 9A FE 25 35 04 8B   .....@RP RS..%5..
6D90:  E5 5D CB 55 8B EC 83 EC  04 56 A1 DF 07 8B 16 E1   .].U.... .V......
6DA0:  07 89 46 FC 89 56 FE 0B  D0 74 6E 8B 46 08 0B 46   ..F..V.. .tn.F..F
6DB0:  06 74 66 FF 76 08 FF 76  06 9A 5E 26 35 04 83 C4   .tf.v..v ..^&5...
6DC0:  04 8B F0 C4 5E FC 26 8B  47 02 26 0B 07 74 4A 26   ....^.&. G.&..tJ&
6DD0:  FF 77 02 26 FF 37 9A 5E  26 35 04 83 C4 04 3B C6   .w.&.7.^ &5....;.
6DE0:  7E 31 C4 5E FC 26 C4 1F  26 80 38 3D 75 25 56 FF   ~1.^.&.. &.8=u%V.
6DF0:  76 08 FF 76 06 06 53 9A  A0 26 35 04 83 C4 0A 0B   v..v..S. .&5.....
6E00:  C0 75 10 C4 5E FC 26 8B  07 26 8B 57 02 03 C6 40   .u..^.&. .&.W...@
6E10:  EB 0A 90 83 46 FC 04 EB  AA 2B C0 99 5E 8B E5 5D   ....F... .+..^..]
6E20:  CB 55 8B EC 53 06 C4 5E  0A 26 C7 07 01 00 33 C0   .U..S..^ .&....3.
6E30:  07 5B 8B E5 5D CA 08 00  55 8B EC 53 06 C4 5E 06   .[..]... U..S..^.
6E40:  33 C0 26 88 07 07 5B 8B  E5 5D CA 04 00 55 8B EC   3.&...[. .]...U..
6E50:  8B E5 5D CA 0A 00 55 8B  EC 53 06 8B 46 0A C4 5E   ..]...U. .S..F..^
6E60:  06 26 89 07 07 5B 8B E5  5D CA 06 00 55 8B EC 8B   .&...[.. ]...U...
6E70:  E5 5D CA 02 00 55 8B EC  1E 8B 4E 0A 8B 5E 10 C5   .]...U.. ..N..^..
6E80:  56 0C B4 40 CD 21 33 C0  1F 8B E5 5D CA 0C 00 A1   V..@.!3. ...]....
6E90:  A4 0B 0A E4 B0 FF 74 17  81 3E 20 0D D6 D6 75 09   ......t. .> ...u.
6EA0:  53 BB FF FF FF 16 22 0D  5B B4 0B CD 21 B4 00 CB   S.....". [...!...
6EB0:  00 B6 01 EB 02 B6 08 A1  A4 0B 0A E4 75 08 C7 06   ........ ....u...
6EC0:  A4 0B FF FF EB 16 81 3E  20 0D D6 D6 75 09 53 BB   .......> ...u.S.
6ED0:  FF FF FF 16 22 0D 5B 92  CD 21 B4 00 CB 55 8B EC   ....".[. .!...U..
6EE0:  8B 46 08 2B 46 0C 1B D2  03 C0 13 D2 03 C0 13 D2   .F.+F... ........
6EF0:  03 C0 13 D2 03 C0 13 D2  03 46 06 83 D2 00 2B 46   ........ .F....+F
6F00:  0A 83 DA 00 5D CA 08 00  00 55 8B EC 56 57 8B 56   ....]... .U..VW.V
6F10:  0A 0B D2 7E 56 4A 8B 5E  0C C4 7E 06 0B D2 74 55   ...~VJ.^ ..~...tU
```

```
6F20:  8B 4F 04 E3 1F 3B CA 76  02 8B CA 1E C5 37 B4 0A   .O...;.v .....7..
6F30:  51 AC AA 3A C4 E0 FA 58  1F 89 37 74 33 29 47 04   Q..:...X ..7t3)G.
6F40:  2B D0 EB D8 06 53 52 1E  53 0E E8 1C E1 83 C4 04   +....SR. S.......
6F50:  5A 5B 07 3D FF FF 74 08  AA 3C 0A 74 18 4A EB BC   Z[.=..t. .<.t.J..
6F60:  3B 7E 06 74 06 F6 47 0A  20 74 0A 33 C0 99 EB 0E   ;~.t..G.  t.3....
6F70:  2B C1 29 47 04 33 C0 AA  8B 46 06 8B 56 08 5F 5E   +.)G.3.. .F..V._^
6F80:  5D CB 00 55 8B EC 83 EC  02 57 56 FF 76 08 FF 76   ]..U.... .WV.v..v
6F90:  06 9A 5E 26 35 04 83 C4  04 8B F8 FF 76 0C FF 76   ..^&5... ....v..v
6FA0:  0A E8 C9 E3 83 C4 04 8B  F0 FF 76 0C FF 76 0A 57   ........ ..v..v.W
6FB0:  B8 01 00 50 FF 76 08 FF  76 06 9A 26 09 35 04 83   ...P.v.. v..&.5..
6FC0:  C4 0C 89 46 FE FF 76 0C  FF 76 0A 56 E8 1F E4 83   ...F..v. .v.V....
6FD0:  C4 06 39 7E FE 75 04 2B  C0 EB 03 B8 FF FF 5E 5F   ..9~.u.+ ......^_
6FE0:  8B E5 5D CB 90 55 8B EC  83 EC 04 57 56 C6 06 FA   ..]..U.. ...WV...
6FF0:  13 42 8B 46 06 8B 56 08  A3 F6 13 89 16 F8 13 BE   .B.F..V. ........
7000:  F0 13 89 04 89 54 02 C7  06 F4 13 FF 7F 8D 46 0E   .....T.. ......F.
7010:  16 50 FF 76 0C FF 76 0A  8B C6 1E 50 9A 1C 18 35   .P.v..v. ...P...5
7020:  04 83 C4 0C 8B F8 FF 0E  F4 13 78 0F C4 1E F0 13   ........ ..x.....
7030:  FF 06 F0 13 26 C6 07 00  EB 0E 90 1E 56 2B C0 50   ....&... ....V+.P
7040:  9A C2 0B 35 04 83 C4 06  8B C7 5E 5F 8B E5 5D CB   ...5.... ..^_..].
7050:  90 55 8B EC 83 EC 04 56  C6 06 06 14 49 8B 46 06   .U.....V ....I.F.
7060:  8B 56 08 A3 02 14 89 16  04 14 BE FC 13 89 04 89   .V...... ........
7070:  54 02 52 50 9A 5E 26 35  04 83 C4 04 A3 00 14 8D   T.RP.^&5 ........
7080:  46 0E 16 50 FF 76 0C FF  76 0A B8 FC 13 1E 50 9A   F..P.v.. v.....P.
7090:  C8 0F 35 04 83 C4 0C 5E  8B E5 5D CB 90 55 8B EC   ..5....^ ..]..U..
70A0:  8E 46 08 B4 49 CD 21 5D  CB 55 8B EC 56 57 8B 5E   .F..I.!] .U..VW.^
70B0:  0A 8B 46 06 F7 E3 8B C8  8B FA 8B 46 08 F7 E3 03   ..F..... ...F....
70C0:  C7 8B D0 0B C1 74 1E 33  F6 8D 47 FF 83 FA 0F 77   .....t.3 ..G....w
70D0:  14 72 05 83 F9 F0 77 0D  83 FA 02 77 04 72 08 E3   .r....w. ...w.r..
70E0:  06 23 C3 74 18 EB 6D 83  FA 01 72 11 23 C3 74 0D   .#.t..m. ..r.#.t.
70F0:  33 C0 F7 F3 8B F2 03 CA  72 5A BA 01 00 8B D9 83   3....... rZ......
7100:  C3 0F 83 D2 00 B9 04 00  D1 EA D1 DB E2 FA B4 48   ........ .......H
7110:  CD 21 72 40 3B 06 98 07  76 F4 8B D0 03 D3 4A 3B   .!r@;... v.....J;
7120:  16 96 07 76 04 89 16 96  07 8E C0 8B D0 FC B9 00   ...v.... ........
7130:  10 3B D9 73 02 8B CB D1  E1 D1 E1 D1 E1 33 FF 33   .;.s.... .....3.3
7140:  C0 F3 AB 96 B9 00 10 2B  D9 76 0C 96 8C C0 03 C1   .......+ .v......
7150:  8E C0 EB DD 33 C0 99 5F  5E 5D CB 55 8B EC 8B 56   ....3.._ ^].U...V
7160:  06 EC 32 E4 8B E5 5D CB  00 55 8B EC 8B 56 06 8A   ..2...]. .U...V..
7170:  46 08 EE B4 00 5D CB 55  8B EC 83 EC 04 8B 46 06   F....].U ......F.
7180:  8B 56 08 2B 46 0A 1B 56  0C 89 56 FE 89 46 FC 8D   .V.+F..V ..V..F..
7190:  5E FC 9A E3 4A 35 04 8E  06 70 0D 8D 1E AC 07 9A   ^...J5.. .p......
71A0:  5E 4A 35 04 B8 AC 07 8C  C2 8B E5 5D CB 55 8B EC   ^J5..... ...].U..
71B0:  83 EC 22 9A CE 2D 35 04  B8 3C 00 99 52 50 FF 36   .."..-5. .<..RP.6
71C0:  E8 0B FF 36 E6 0B 9A 9A  33 35 04 C4 5E 06 26 89   ...6.... 35..^.&.
71D0:  47 06 8D 46 FA 16 50 9A  20 33 35 04 83 C4 04 8D   G..F..P.  35.....
71E0:  46 F6 16 50 9A 3C 33 35  04 83 C4 04 80 7E F6 00   F..P.<35 .....~..
71F0:  75 13 80 7E F7 00 75 0D  8D 46 FA 16 50 9A 20 33   u..~..u. .F..P. 3
7200:  35 04 83 C4 04 8B 46 FC  2D BC 07 89 46 E0 05 50   5.....F. -...F..P
7210:  00 89 46 EE 8A 46 FA 2A  E4 89 46 DE 89 46 EA 8A   ..F..F.* ..F..F..
7220:  5E FB 2A FF 89 5E E2 4B  89 5E EC D1 E3 03 87 C0   ^.*..^.K .^......
7230:  0B 89 46 F2 F6 46 E0 03  75 0A 83 7E E2 02 7E 04   ..F..F.. u..~..~.
7240:  40 89 46 F2 8A 46 F6 2A  E4 89 46 E8 8A 46 F9 8B   @.F..F.* ..F..F..
7250:  C8 D1 E0 D1 E0 03 C1 D1  E0 C4 5E 06 26 89 47 04   ........ ..^.&.G.
7260:  8A 46 F8 2A E4 50 8A 46  F7 50 8A 46 F6 50 FF 76   .F.*.P.F .P.F.P.v
7270:  DE FF 76 E2 FF 76 E0 9A  8A 2F 35 04 83 C4 0C C4   ..v..v.. ./5.....
```

```
7280:  5E 06 26 89 07 26 89 57  02 83 3E EA 0B 00 74 1D   ^.&..&.W ..>...t.
7290:  8D 46 E4 16 50 9A B0 2E  35 04 83 C4 04 0B C0 74   .F..P... 5......t
72A0:  0C C4 5E 06 26 C7 47 08  01 00 EB 0A 90 C4 5E 06   ..^.&.G. ......^.
72B0:  26 C7 47 08 00 00 8B E5  5D CB 90 55 8B EC 56 B4   &.G..... ]..U..V.
72C0:  2A CD 21 8B DA 8B F1 B4  2C CD 21 B4 00 8A C6 50   *.!..... ,.!....P
72D0:  8A C1 50 8A C5 50 50 B4  2A CD 21 3B DA 58 74 08   ..P..PP. *.!;.Xt.
72E0:  3C 17 75 04 8B D3 8B CE  B4 00 8A C2 50 8A C6 50   <.u..... ....P._P
72F0:  81 E9 BC 07 51 9A 8A 2F  35 04 83 C4 0C 83 7E 08   ....Q../ 5.....~.
7300:  00 74 0A C4 5E 06 26 89  57 02 26 89 07 5E 5D CB   .t..^.&. W.&..^].
7310:  00 83 3E 08 14 00 75 09  9A E0 2D 35 04 FF 06 08   ..>...u. ..-5....
7320:  14 CB 90 55 8B EC 83 EC  04 56 B8 DA 0B 1E 50 9A   ...U.... .V....P.
7330:  50 28 35 04 83 C4 04 89  46 FC 89 56 FE 0B D0 75   P(5..... F..V...u
7340:  03 E9 A9 00 C4 5E FC 26  80 3F 00 75 03 E9 9D 00   .....^.& .?.u....
7350:  B8 03 00 50 06 53 FF 36  EE 0B FF 36 EC 0B 9A 76   ...P.S.6 ...6...v
7360:  26 35 04 83 C4 0A B8 10  0E 99 52 50 83 46 FC 03   &5...... ..RP.F..
7370:  FF 76 FE FF 76 FC 9A DC  26 35 04 83 C4 04 52 50   .v..v... &5....RP
7380:  9A 34 34 35 04 A3 E6 0B  89 16 E8 0B 2B F6 8E 46   .445.... ....+..F
7390:  FE 8B 5E FC 26 80 38 00  74 1A 26 8A 00 8B C8 98   ..^.&.8. t.&.....
73A0:  8B D8 F6 87 A3 0A 04 75  05 80 F9 2D 75 06 46 83   .......u ...-u.F.
73B0:  FE 03 7C DD 8B 5E FC 26  80 38 00 74 1A B8 03 00   ..|..^.& .8.t....
73C0:  50 03 DE 06 53 FF 36 F2  0B FF 36 F0 0B 9A 76 26   P...S.6. ..6...v&
73D0:  35 04 83 C4 0A EB 08 C4  1E F0 0B 26 C6 07 00 C4   5....... ...&....
73E0:  1E F0 0B 26 80 3F 01 1B  C0 40 A3 EA 0B 5E 8B E5   ...&.?.. .@...^..
73F0:  5D CB 90 55 8B EC 83 EC  04 57 56 C4 5E 06 26 83   ]..U.... .WV.^.&.
7400:  7F 08 03 7D 03 E9 BD 00  26 83 7F 08 09 7E 03 E9   ...}...  &....~..
7410:  B3 00 26 83 7F 08 03 7E  0A 26 83 7F 08 09 7D 03   ..&....~ .&....}.
7420:  E9 89 00 26 8B 77 0A 81  C6 6C 07 81 FE C2 07 7E   ...&.w.. .l.....~
7430:  16 26 83 7F 08 03 75 0F  26 8B 5F 08 D1 E3 8B 87   .&....u. &._.....
7440:  C0 0B 05 07 00 EB 0A 26  8B 5F 08 D1 E3 8B 87 C2   .......& ._......
7450:  0B 89 46 FC F7 C6 03 00  75 03 FF 46 FC 8B 5E 06   ..F..... u..F..^.
7460:  26 8B 77 0A 83 EE 46 8B  C6 B9 6D 01 F7 E9 8B C8   &.w...F. ..m.....
7470:  8D 44 01 8B F9 99 33 C2  2B C2 B9 02 00 D3 F8 33   .D....3. +......3
7480:  C2 2B C2 03 C7 03 46 FC  05 04 00 B9 07 00 99 F7   .+....F. ........
7490:  F9 2B 56 FC F7 DA 26 83  7F 08 03 75 14 26 3B 57   .+V...&. ...u.&;W
74A0:  0E 7C 09 75 20 26 83 7F  04 02 7C 19 B8 01 00 EB   .|.u &.. ..|.....
74B0:  16 C4 5E 06 8B C2 26 39  47 0E 7C F0 75 07 26 83   ..^...&9 G.|.u.&.
74C0:  7F 04 01 7C E7 2B C0 5E  5F 8B E5 5D CB 55 8B EC   ...|.+.^ _..].U..
74D0:  83 EC 16 57 56 8B 76 06  B8 80 51 BA 01 00 52 50   ...WV.v. ..Q...RP
74E0:  8D 44 03 99 33 C2 2B C2  B9 02 00 D3 F8 33 C2 2B   .D..3.+. .....3.+
74F0:  C2 99 52 50 9A 34 34 35  04 89 46 EA 89 56 EC 8B   ..RP.445 ..F..V..
7500:  5E 08 D1 E3 8B BF BE 0B  8B C6 B9 04 00 99 F7 F9   ^....... ........
7510:  0B D2 75 07 83 7E 08 02  7E 01 47 8B 46 0A 03 C7   ..u..~.. ~.G.F...
7520:  89 46 FC 9A CE 2D 35 04  B8 3C 00 99 52 50 52 50   .F...-5. .<..RPRP
7530:  B8 18 00 99 52 50 B9 6D  01 8B C6 F7 E9 03 46 0A   ....RP.m ......F.
7540:  03 C7 99 05 44 0E 83 D2  00 52 50 9A 34 34 35 04   ....D... .RP.445.
7550:  8B C8 8B 46 0C 8B DA 99  03 C1 13 D3 52 50 9A 34   ...F.... ....RP.4
7560:  34 35 04 8B C8 8B 46 0E  8B DA 99 03 C1 13 D3 52   45....F. .......R
7570:  50 9A 34 34 35 04 8B C8  8B 46 10 8B DA 99 03 C1   P.445... .F......
7580:  13 D3 03 06 E6 0B 13 16  E8 0B 01 46 EA 11 56 EC   ........ ...F..V.
7590:  8D 44 50 89 46 F8 8B 46  08 48 89 46 F6 8B 46 0C   .DP.F..F .H.F..F.
75A0:  89 46 F2 83 3E EA 0B 00  74 1A 8D 46 EE 16 50 9A   .F..>... t..F..P.
75B0:  B0 2E 35 04 83 C4 04 0B  C0 74 09 81 6E EA 10 0E   ..5..... .t..n...
75C0:  83 5E EC 00 8B 46 EA 8B  56 EC 5E 5F 8B E5 5D CB   .^...F.. V.^_..].
75D0:  90 55 8B EC 83 EC 0E 8E  06 72 0D 26 C7 06 30 0C   .U...... .r.&..0.
```

```
75E0:  00 00 8D 46 F6 16 50 9A  6A 2C 35 04 83 C4 04 B8   ...F..P. j,5.....
75F0:  E8 03 99 52 50 8B 46 F6  8B 56 F8 2B 06 32 0C 1B   ...RP.F. .V.+.2..
7600:  16 34 0C 52 50 9A 34 34  35 04 8B C8 8B 46 FA 2B   .4.RP.44 5....F.+
7610:  06 36 0C 8B DA 99 03 C1  13 D3 89 46 F2 89 56 F4   .6...... ...F..V.
7620:  8B E5 5D CB 90 B8 32 0C  1E 50 9A 6A 2C 35 04 83   ..]...2. .P.j,5..
7630:  C4 04 CB 55 8B EC 8B 4E  0E 1E 57 56 0B C9 75 03   ...U...N ..WV..u.
7640:  E9 AF 00 C5 76 0A C4 7E  06 1E 56 06 57 9A 9A 29   ....v..~ ..V.W..)
7650:  35 04 8B 4E 0E 0B D2 78  57 2B C1 83 DA 00 73 50   5..N...x W+....sP
7660:  49 03 F1 73 07 8C D8 05  00 10 8E D8 03 F9 73 07   I..s.... ......s.
7670:  8C C0 05 00 10 8E C0 41  8B C1 48 2B C7 1B DB 23   .......A ..H+...#
7680:  C3 03 C7 2B C6 1B DB 23  C3 03 C6 40 91 2B C1 FD   ...+...# ...@.+..
7690:  F3 A4 FC 91 E3 5C 83 FE  FF 75 07 8C D8 2D 00 10   .....\.. .u...-..
76A0:  8E D8 83 FF FF 75 D1 8C  C0 2D 00 10 8E C0 EB C8   .....u.. .-......
76B0:  8B C1 48 8B D7 F7 D2 2B  C2 1B DB 23 C3 03 C2 8B   ..H....+ ...#....
76C0:  D6 F7 D2 2B C2 1B DB 23  C3 03 C2 40 91 2B C1 D1   ...+...# ...@.+..
76D0:  E9 F3 A5 13 C9 F3 A4 91  E3 18 0B F6 75 07 8C D8   ........ ....u...
76E0:  05 00 10 8E D8 0B FF 75  C7 8C C0 05 00 10 8E C0   .......u ........
76F0:  EB BE 8B 46 06 8B 56 08  5E 5F 1F 5D CB 55 8B EC   ...F..V. ^_.].U..
7700:  8B 4E 0E 1E 57 56 E3 48  C5 76 0A C4 7E 06 8B C1   .N..WV.H .v..~...
7710:  48 8B D7 F7 D2 2B C2 1B  DB 23 C3 03 C2 8B D6 F7   H....+.. .#......
7720:  D2 2B C2 1B DB 23 C3 03  C2 40 91 2B C1 D1 E9 F3   .+...#.. .@.+....
7730:  A5 13 C9 F3 A4 91 E3 18  0B F6 75 07 8C D8 05 00   ........ ..u.....
7740:  10 8E D8 0B FF 75 C7 8C  C0 05 00 10 8E C0 EB BE   .....u.. ........
7750:  8B 46 06 8B 56 08 5E 5F  1F 5D CB 55 8B EC 8B 4E   .F..V.^_ .].U...N
7760:  0C E3 38 57 C4 7E 06 8B  D7 F7 DA 74 0C 2B D1 1B   ..8W.~.. ...t.+..
7770:  DB 23 D3 03 D1 87 D1 2B  D1 8B 46 0A 8A E0 D1 E9   .#.....+ ..F.....
7780:  F3 AB 13 C9 F3 AA 87 D1  E3 10 8C C3 81 C3 00 10   ........ ........
7790:  8E C3 D1 E9 F3 AB 13 C9  F3 AA 5F 8B 46 06 8B 56   ........ .._.F..V
77A0:  08 5D CB 8B 4E 0E 8B 46  06 8B 56 08 1E C5 7E 0A   .]..N..F ..V...~.
77B0:  57 1E 07 FC 93 0A C0 74  13 83 F9 0A 75 0E 0B D2   W......t ....u...
77C0:  79 0A B0 2D AA F7 DB 83  D2 00 F7 DA 8B F7 92 33   y..-.... .......3
77D0:  D2 0B C0 74 02 F7 F1 93  F7 F1 92 87 D3 04 30 3C   ...t.... ......0<
77E0:  39 76 02 04 27 AA 8B C2  0B C3 75 E2 88 05 4F AC   9v..'... ..u...O.
77F0:  86 05 88 44 FF 8D 44 01  3B C7 72 F2 8C DA 58 1F   ...D..D. ;.r...X.
7800:  5F 5E 8B E5 5D CB 00 55  8B EC 8B 46 06 99 33 C2   _^..]..U ...F..3.
7810:  2B C2 5D CB 90 8A 0F 2A  ED 43 8B D3 BB 02 00 81   +.]....* .C......
7820:  3E 20 0D D6 D6 75 04 FF  16 22 0D B4 40 CD 21 CB   > ...u.. ."..@.!.
7830:  00 55 8B EC 1E C5 56 06  B8 00 43 CD 21 1F 72 0F   .U....V. ..C.!.r.
7840:  F6 46 0A 02 74 09 F6 C1  01 74 04 B8 00 0D F9 E9   .F..t... .t......
7850:  D9 D2 00 55 8B EC 1E C5  56 06 B4 41 CD 21 1F E9   ...U.... V..A.!..
7860:  C9 D2 00 55 8B EC B4 2A  CD 21 1E C5 5E 06 89 4F   ...U...* .!..^..O
7870:  02 88 77 01 88 17 88 47  04 1F 33 C0 5D CB 00 55   ..w....G ..3.]..U
7880:  8B EC B4 2C CD 21 1E C5  5E 06 88 2F 88 4F 01 88   ...,.!.. ^../.O..
7890:  77 02 88 57 03 1F 33 C0  5D CB 00 55 8B EC 1E 53   w..W..3. ]..U...S
78A0:  C5 5E 06 FF 76 0C FF 76  0A FF 77 02 FF 37 0E E8   .^..v..v ..w..7..
78B0:  C5 00 89 07 89 57 02 5B  1F 5D CA 08 00 55 8B EC   .....W.[ .]...U..
78C0:  1E 53 C5 5E 06 8B 07 8B  57 02 8B 4E 0A 0E E8 78   .S.^.... W..N...x
78D0:  01 89 07 89 57 02 5B 1F  5D CA 06 00 00 55 8B EC   ....W.[. ]....U..
78E0:  57 56 53 33 FF 8B 46 08  0B C0 7D 11 47 8B 56 06   WVS3..F. ..}.G.V.
78F0:  F7 D8 F7 DA 1D 00 00 89  46 08 89 56 06 8B 46 0C   ........ F..V..F.
7900:  0B C0 7D 11 47 8B 56 0A  F7 D8 F7 DA 1D 00 00 89   ..}.G.V. ........
7910:  46 0C 89 56 0A 0B C0 75  15 8B 4E 0A 8B 46 08 33   F..V...u ..N..F.3
7920:  D2 F7 F1 8B D8 8B 46 06  F7 F1 8B D3 EB 38 8B D8   ......F. .....8..
7930:  8B 4E 0A 8B 56 08 8B 46  06 D1 EB D1 D9 D1 EA D1   .N..V..F ........
```

```
7940:  D8 0B DB 75 F4 F7 F1 8B  F0 F7 66 0C 91 8B 46 0A   ...u.... ..f...F.
7950:  F7 E6 03 D1 72 0C 3B 56  08 77 07 72 06 3B 46 06   ....r.;V .w.r.;F.
7960:  76 01 4E 33 D2 96 4F 75  07 F7 DA F7 D8 83 DA 00   v.N3..Ou ........
7970:  5B 5E 5F 5D CA 08 00 55  8B EC 8B 46 08 8B 4E 0C   [^_]...U ...F..N.
7980:  0B C8 8B 4E 0A 75 09 8B  46 06 F7 E1 5D CA 08 00   ...N.u.. F...]...
7990:  53 F7 E1 8B D8 8B 46 06  F7 66 0C 03 D8 8B 46 06   S.....F. .f....F.
79A0:  F7 E1 03 D3 5B 5D CA 08  00 55 8B EC 53 57 33 FF   ....[].. .U..SW3.
79B0:  8B 46 08 0B C0 7D 11 47  8B 56 06 F7 D8 F7 DA 1D   .F...}.G .V......
79C0:  00 00 89 46 08 89 56 06  8B 46 0C 0B C0 7D 10 8B   ...F..V. .F...}..
79D0:  56 0A F7 D8 F7 DA 1D 00  00 89 46 0C 89 56 0A 0B   V....... ..F..V..
79E0:  C0 75 18 8B 4E 0A 8B 46  08 33 D2 F7 F1 8B 46 06   .u..N..F .3....F.
79F0:  F7 F1 8B C2 33 D2 4F 79  43 EB 48 8B D8 8B 4E 0A   ....3.Oy C.H...N.
7A00:  8B 56 08 8B 46 06 D1 EB  D1 D9 D1 EA D1 D8 0B DB   .V..F... ........
7A10:  75 F4 F7 F1 8B C8 F7 66  0C 91 F7 66 0A 03 D1 72   u......f ...f...r
7A20:  0C 3B 56 08 77 07 72 0B  3B 46 06 76 06 2B 46 0A   .;V.w.r. ;F.v.+F.
7A30:  1B 56 0C 2B 46 06 1B 56  08 4F 79 07 F7 DA F7 D8   .V.+F..V .Oy.....
7A40:  83 DA 00 5F 5B 5D CA 08  00 32 ED E3 06 D1 E0 D1   ..._[].. .2......
7A50:  D2 E2 FA CB 00 55 8B EC  53 8B 5E 06 FF 76 0A FF   .....U.. S.^..v..
7A60:  76 08 FF 77 02 FF 37 0E  E8 0A 00 89 57 02 89 07   v..w..7. ....W...
7A70:  5B 5D CA 06 00 55 8B EC  53 56 8B 46 0C 0B C0 75   []...U.. SV.F...u
7A80:  15 8B 4E 0A 8B 46 08 33  D2 F7 F1 8B D8 8B 46 06   ..N..F.3 ......F.
7A90:  F7 F1 8B D3 EB 38 8B C8  8B 5E 0A 8B 56 08 8B 46   .....8.. .^..V..F
7AA0:  06 D1 E9 D1 DB D1 EA D1  D8 0B C9 75 F4 F7 F3 8B   ........ ...u....
7AB0:  F0 F7 66 0C 91 8B 46 0A  F7 E6 03 D1 72 0C 3B 56   ..f...F. ....r.;V
7AC0:  08 77 07 72 06 3B 46 06  76 01 4E 33 D2 96 5E 5B   .w.r.;F. v.N3..^[
7AD0:  5D CA 08 00 00 66 FC FF  FF FF FF FF FF FE 3F CD   ]....f.. ......?.
7AE0:  CC CC CC CC CC CC CC FB  3F BE 48 0C C7 04 01 30   ........ ?.H....0
7AF0:  33 C0 8B D0 40 B3 20 07  C3 0B D2 75 0A 83 F9 F8   3...@. . ...u....
7B00:  74 17 80 E1 0F 74 0D BE  60 0C F6 C1 08 75 0D BE   t....t.. `....u..
7B10:  59 0C EB 08 BE 67 0C EB  03 BE 6D 0C BA 01 00 07   Y....g.. ..m.....
7B20:  33 C0 C3 06 8C D8 8E C0  FC BF 3C 0C 57 B9 04 00   3....... ..<.W...
7B30:  F3 A5 5E 8B 4C 06 80 64  07 7F B3 20 8B 04 0B 44   ..^.L..d ... ...D
7B40:  02 0B 44 04 8B D0 0B 44  06 74 9E 0B C9 79 02 B3   ..D....D .t...y..
7B50:  2D F7 D1 F7 C1 F0 7F F7  D1 74 9E 53 CD 35 3E 75   -....... .t.S.5>u
7B60:  0C CD 3D 50 A0 75 0C A2  77 0C 58 CD 35 2E 77 0C   ..=P.u.. w.X.5.w.
7B70:  CD 39 04 CD 35 C0 CD 37  3C CD 3D 33 FF BE 43 0C   .9..5..7 <.=3..C.
7B80:  AC 8A F8 AD 8B C8 BA 10  4D F7 E2 91 B0 4D F6 E4   ........ M....M..
7B90:  03 C8 13 D7 B0 9A F6 E7  03 C8 13 FA 81 E9 F4 12   ........ ........
7BA0:  81 DF 43 13 57 F7 DF BE  3C 0C E8 37 02 BB 92 35   ..C.W... <..7...5
7BB0:  5F CD 3C 9B 2F CD 34 D9  CD 39 3E 73 0C CD 3D F6   _.<./.4. .9>s..=.
7BC0:  06 74 0C 41 74 0B 47 BB  9C 35 CD 3C 9B 2F CD 3A   .t.At.G. .5.<./.:
7BD0:  C9 57 CD 37 3C CD 35 2E  75 0C CD 3D AD 97 AD 95   .W.7<.5. u..=....
7BE0:  AD 92 AD 93 AD 91 81 E9  FE 3F F7 D9 8B F7 33 C0   ........ .?....3.
7BF0:  E3 0C D1 EB D1 DA D1 DD  D1 DE D0 DC E2 F4 81 D6   ........ ........
7C00:  9A 03 13 E9 13 D1 13 D9  BF 49 0C B9 10 00 32 C0   ........ .I....2.
7C10:  51 53 52 55 56 50 D0 E4  D1 D6 D1 D5 D1 D2 D1 D3   QSRUVP.. ........
7C20:  D0 D0 D0 E4 D1 D6 D1 D5  D1 D2 D1 D3 D0 D0 59 12   ........ ......Y.
7C30:  E5 59 13 F1 59 13 E9 59  13 D1 59 13 D9 14 00 D0   .Y..Y..Y ..Y.....
7C40:  E4 D1 D6 D1 D5 D1 D2 D1  D3 D0 D0 59 04 30 AA E2   ........ ...Y.0..
7C50:  BD 4F 49 B0 30 FD F3 AE  FC 83 C1 12 BE 48 0C 88   .OI.0... .....H..
7C60:  0C B8 01 00 5A 5B 07 C3  00 00 00 00 00 00 00 A0   ....Z[.. ........
7C70:  02 40 00 00 00 00 00 00  00 C8 05 40 00 00 00 00   .@...... ...@....
7C80:  00 00 00 FA 08 40 00 00  00 00 00 00 40 9C 0C 40   .....@.. ....@..@
7C90:  00 00 00 00 00 00 50 C3  0F 40 00 00 00 00 00 00   ......P. .@......
```

```
7CA0:  24 F4 12 40 00 00 00 00  00 80 96 98 16 40 00 00   $..@.... .....@..
7CB0:  00 00 00 20 BC BE 19 40  00 00 00 04 BF C9 1B 8E   ... ...@ ........
7CC0:  34 40 00 A1 ED CC CE 1B  C2 D3 4E 40 9E B5 70 2B   4@...... ..N@..p+
7CD0:  A8 AD C5 9D 69 40 FD 25  E5 1A 8E 4F 19 EB 83 40   ....i@.% ...O...@
7CE0:  D7 95 43 0E 05 8D 29 AF  9E 40 A0 44 ED 81 12 8F   ..C...). .@.D....
7CF0:  81 82 B9 40 D5 A6 CF FF  49 1F 78 C2 D3 40 E0 8C   ...@.... I.x..@..
7D00:  E9 80 C9 47 BA 93 A8 41  6B 55 27 39 8D F7 70 E0   ...G...A kU'9..p.
7D10:  7C 42 8E DE F9 9D FB EB  7E AA 51 43 76 E3 CC F2   |B...... ~.QCv...
7D20:  29 2F 84 81 26 44 CD CC  CC CC CC CC CC CC FB 3F   )/..&D.. .......?
7D30:  0A D7 A3 70 3D 0A D7 A3  F8 3F 3B DF 4F 8D 97 6E   ...p=... .?;.O..n
7D40:  12 83 F5 3F 2C 65 19 E2  58 17 B7 D1 F1 3F 23 84   ...?,e.. X....?#.
7D50:  47 1B 47 AC C5 A7 EE 3F  B6 69 6C AF 05 BD 37 86   G.G....? .il...7.
7D60:  EB 3F BC 42 7A E5 D5 94  BF D6 E7 3F FD CE 61 84   .?.Bz... ...?..a.
7D70:  11 77 CC AB E4 3F 5B E1  4D C4 BE 94 95 E6 C9 3F   .w...?[. M......?
7D80:  53 3B 75 44 CD 14 BE 9A  AF 3F BA 94 39 45 AD 1E   S;uD.... .?..9E..
7D90:  B1 CF 94 3F C6 E2 BC BA  3B 31 61 8B 7A 3F 59 C1   ...?.... ;1a.z?Y.
7DA0:  7E B1 53 7C 12 BB 5F 3F  2F 8D 06 BE 92 85 15 FB   ~.S|.._? /.......
7DB0:  44 3F A5 E9 39 A5 27 EA  7F A8 2A 3F A1 E4 BC 64   D?..9.'. ..*?...d
7DC0:  7C 46 D0 DD 55 3E 06 CC  23 54 77 83 FF 91 81 3D   |F..U>.. #Tw....=
7DD0:  3A 19 7A 63 25 43 31 C0  AC 3C D1 38 82 47 97 B8   :.zc%C1. .<.8.G..
7DE0:  00 FD D7 3B BB D5 36 0B  FF 79 05 BB 93 37 F7 DF   ...;..6. .y...7..
7DF0:  57 5F 81 C3 46 00 0B FF  74 27 8B C7 D1 EF D1 EF   W_..F... t'......
7E00:  D1 EF 57 25 07 00 74 E9  53 D0 E0 8A E0 D0 E0 D0   ..W%..t. S.......
7E10:  E0 02 C4 32 E4 03 D8 CD  3C 9B 2F CD 3A C9 5B EB   ...2.... <./.:.[.
7E20:  D0 C3 00 CD CC CC CC CC  CC CC CC FB 3F CD D1 38   ........ ....?..8
7E30:  B2 CC 09 00 B0 FB 3F 55  8B EC 83 EC 0C 56 57 1E   ......?U .....VW.
7E40:  33 C0 87 46 08 89 46 FE  8B 7E 04 8B 46 12 36 C6   3..F..F. .~..F.6.
7E50:  45 02 20 F6 C4 80 74 0C  80 66 13 7F 36 C6 45 02   E. ...t. .f..6.E.
7E60:  2D 25 FF 7F 0B C0 75 10  8B 46 0A 0B 46 0C 0B 46   -%....u. .F..F..F
7E70:  0E 0B 46 10 74 4D EB 65  3D FF 7F 75 60 8B 46 0A   ..F.tM.e =..u`.F.
7E80:  0B 46 0C 0B 46 0E 8B 46  10 75 17 BE 94 0C 3D 00   .F..F..F .u....=.
7E90:  80 74 1A 3D 00 C0 75 0A  BE 9A 0C 36 80 7D 02 2D   .t.=..u. ...6.}.-
7EA0:  74 0B BE 86 0C A9 00 40  74 03 BE 8D 0C 36 C7 05   t......@ t....6..
7EB0:  01 00 16 07 8D 7D 03 33  C9 8A 0C 41 F3 A4 33 C0   .....}.3 ...A..3.
7EC0:  E9 79 01 8B 7E 04 36 C7  05 00 00 36 C6 45 02 20   .y..~.6. ...6.E.
7ED0:  36 C6 45 03 00 36 C6 45  04 00 E9 5C 01 33 FF 8A   6.E..6.E ...\.3..
7EE0:  7E 11 8B 46 12 8B C8 BA  10 4D F7 E2 91 B0 4D F6   ~..F.... .M....M.
7EF0:  E4 03 C8 13 D7 B0 9A F6  E7 03 C8 13 FA 81 E9 F4   ........ ........
7F00:  12 81 DF 43 13 57 F7 DF  8D 46 08 16 50 57 B8 01   ...C.W.. .F..PW..
7F10:  00 50 E8 E8 03 5F 81 7E  12 FF 3F 72 10 47 8D 46   .P..._.~ ..?r.G.F
7F20:  08 16 50 B8 EA 38 0E 50  E8 A7 04 EB E9 8B 5E 04   ..P..8.P ......^.
7F30:  36 89 3F 8B 46 FE F7 46  06 01 00 74 06 03 C7 79   6.?.F..F ...t...y
7F40:  02 EB 80 3D 15 00 76 03  B8 15 00 89 46 FE 40 89   ...=..v. ....F.@.
7F50:  46 F4 8B 46 12 2D FE 3F  F7 D8 32 E4 8B 5E 10 8B   F..F.-.? ..2..^..
7F60:  4E 0E 8B 56 0C 8B 76 0A  8B 7E 08 0A C0 74 10 D1   N..V..v. .~...t..
7F70:  EB D1 D9 D1 DA D1 DE D1  DF D0 DC FE C8 75 F0 16   ........ .....u..
7F80:  07 89 7E F6 8B 7E 04 8D  7D 04 87 7E F6 32 C0 89   ..~..~.. }..~.2..
7F90:  5E 12 89 4E 10 89 56 0E  89 76 0C 89 7E 0A 88 66   ^..N..V. .v..~..f
7FA0:  09 D0 E4 D1 D7 D1 D6 D1  D2 D1 D1 D1 D3 D0 D0 D0   ........ ........
7FB0:  E4 D1 D7 D1 D6 D1 D2 D1  D1 D1 D3 D0 D0 02 66 09   ........ ......f.
7FC0:  13 7E 0A 13 76 0C 13 56  0E 13 4E 10 13 5E 12 14   .~..v..V ..N..^..
7FD0:  00 D0 E4 D1 D7 D1 D6 D1  D2 D1 D1 D1 D3 D0 D0 04   ........ ........
7FE0:  30 87 7E F6 AA 87 7E F6  FF 4E F4 75 A0 8B 7E F6   0.~...~. .N.u..~.
7FF0:  8B 76 04 83 EF 02 3C 35  72 2A 8D 4C 04 EB 0B 26   .v....<5 r*.L...&
```

SAMPLE.DMP Thursday, January 6, 1994 12:01pm Page 39

```
8000:  80 3D 39 75 11 26 C6 05  30 4F 3B CF 76 F1 47 26   .=9u.&.. 0O;.v.G&
8010:  C6 05 30 36 FF 04 26 FE  05 2B F9 8B DF 43 36 88   ..06..&. .+...C6.
8020:  5C 03 EB 15 8B 4E FE E3  08 B0 30 FD F3 AE FC 75   \....N.. ..0....u
8030:  03 E9 8F FE 41 36 88 4C  03 B8 01 00 1F 5F 5E 8B   ....A6.L ....._^.
8040:  E5 5D C2 10 0F 02 B2 00  0A 00 B0 A0 02 40 03 00   .]...... .....@..
8050:  B2 00 09 00 B0 C8 05 40  03 00 B2 00 09 00 B0 FA   .......@ ........
8060:  08 40 03 00 B2 00 08 00  B0 40 9C 0C 40 04 00 B2   .@...... .@..@...
8070:  00 08 00 B0 50 C3 0F 40  04 00 B2 00 08 00 B0 24   ....P..@ .......$
8080:  F4 12 40 00 00 00 00 00  00 00 80 96 98 16 40 00   ..@..... ......@.
8090:  00 00 00 00 00 00 20 BC  BE 19 40 00 00 00 00 00   ...... . ..@.....
80A0:  04 BF C9 1B 8E 34 40 00  00 00 A1 ED CC CE 1B C2   .....4@. ........
80B0:  D3 4E 40 20 F0 9E B5 70  2B A8 AD C5 9D 69 40 D0   .N@ ...p +....i@.
80C0:  5D FD 25 E5 1A 8E 4F 19  EB 83 40 71 96 D7 95 43   ].%...O. ..@q...C
80D0:  0E 05 8D 29 AF 9E 40 F9  BF A0 44 ED 81 12 8F 81   ...)..@. ..D.....
80E0:  82 B9 40 BF 3C D5 A6 CF  FF 49 1F 78 C2 D3 40 6F   ..@.<... .I.x..@o
80F0:  C6 E0 8C E9 80 C9 47 BA  93 A8 41 BC 85 6B 55 27   ......G. ..A..kU'
8100:  39 8D F7 70 E0 7C 42 BC  DD 8E DE F9 9D FB EB 7E   9..p.|B. .......~
8110:  AA 51 43 A1 E6 76 E3 CC  F2 29 2F 84 81 26 44 28   .QC..v.. .)/..&D(
8120:  10 17 AA F8 AE 10 E3 C5  C4 FA 44 EB A7 D4 F3 F7   ........ ..D.....
8130:  EB E1 4A 7A 95 CF 45 65  CC C7 91 0E A6 AE A0 19   ..Jz..Ee ........
8140:  E3 A3 46 0D 65 17 0C 75  81 86 75 76 C9 48 4D 58   ..F.e..u ..uv.HMX
8150:  42 E4 A7 93 39 3B 35 B8  B2 ED 53 4D A7 E5 5D 3D   B...9;5. ..SM..]=
8160:  C5 5D 3B 8B 9E 92 5A FF  5D A6 F0 A1 20 C0 54 A5   .];...Z. ]... .T.
8170:  8C 37 61 D1 FD 8B 5A 8B  D8 25 5D 89 F9 DB 67 AA   .7a...Z. .%]...g.
8180:  95 F8 F3 27 BF A2 C8 5D  DD 80 6E 4C C9 9B 97 20   ...'...] ..nL...
8190:  8A 02 52 60 C4 25 75 CD  CC CD CC CC CC CC CC CC   ..R`.%u. ........
81A0:  CC FB 3F 71 3D 0A D7 A3  70 3D 0A D7 A3 F8 3F 5A   ..?q=... p=....?Z
81B0:  64 3B DF 4F 8D 97 6E 12  83 F5 3F C3 D3 2C 65 19   d;.O..n. ..?..,e.
81C0:  E2 58 17 B7 D1 F1 3F D0  0F 23 84 47 1B 47 AC C5   .X....?. .#.G.G..
81D0:  A7 EE 3F 40 A6 B6 69 6C  AF 05 BD 37 86 EB 3F 33   ..?@..il ...7..?3
81E0:  3D BC 42 7A E5 D5 94 BF  D6 E7 3F C2 FD FD CE 61   =.Bz.... ..?....a
81F0:  84 11 77 CC AB E4 3F 2F  4C 5B E1 4D C4 BE 94 95   ..w...?/ L[.M....
8200:  E6 C9 3F 92 C4 53 3B 75  44 CD 14 BE 9A AF 3F DE   ..?..S;u D.....?.
8210:  67 BA 94 39 45 AD 1E B1  CF 94 3F 24 23 C6 E2 BC   g..9E... ..?$#...
8220:  BA 3B 31 61 8B 7A 3F 61  55 59 C1 7E B1 53 7C 12   .;1a.z?a UY.~.S|.
8230:  BB 5F 3F D7 EE 2F 8D 06  BE 92 85 15 FB 44 3F 24   ._?../.. .....D?$
8240:  3F A5 E9 39 A5 27 EA 7F  A8 2A 3F 7D AC A1 E4 BC   ?..9.'.. .*?}....
8250:  64 7C 46 D0 DD 55 3E 63  7B 06 CC 23 54 77 83 FF   d|F..U>c {..#Tw..
8260:  91 81 3D 91 FA 3A 19 7A  63 25 43 31 C0 AC 3C 21   ..=..:.z c%C1..<!
8270:  89 D1 38 82 47 97 B8 00  FD D7 3B DC 88 58 08 1B   ..8.G... ..;..X..
8280:  B1 E8 E3 86 A6 03 3B C6  84 45 42 07 B6 99 75 37   ......;. .EB...u7
8290:  DB 2E 3A 33 71 1C D2 23  DB 32 EE 49 90 5A 39 A6   ..:3q..# .2.I.Z9.
82A0:  87 BE C0 57 DA A5 82 A6  A2 B5 32 E2 68 B2 11 A7   ...W.... ..2.h...
82B0:  52 9F 44 59 B7 10 2C 25  49 E4 2D 36 34 4F 53 AE   R.DY..,% I.-64OS.
82C0:  CE 6B 25 8F 59 04 A4 C0  DE C2 7D FB E8 C6 1E 9E   .k%.Y... ..}.....
82D0:  E7 88 5A 57 91 3C BF 50  83 22 18 4E 4B 65 62 FD   ..ZW.<.P .".NKeb.
82E0:  83 8F AF 06 94 7D 11 E4  2D DE 9F CE D2 C8 04 DD   .....}.. -.......
82F0:  A6 D8 0A 55 8B EC 83 EC  06 56 57 8B 7E 06 BB A4   ...U.... .VW.~...
8300:  3A 0B FF 74 7A 79 05 BB  00 3C F7 DF C7 46 FA 5A   :..tzy.. .<...F.Z
8310:  3E 83 7E 04 00 75 20 C7  46 FA 50 3E CD 35 7E FE   >.~..u . F.P>.5~.
8320:  CD 3D 8B 46 FE 0D 38 00  89 46 FC CD 35 6E FC C4   .=.F..8. .F..5n..
8330:  76 08 CD 3C DB 6C 02 57  5F 83 C3 54 0B FF 74 23   v..<.l.W _..T..t#
8340:  8B C7 D1 EF D1 EF D1 EF  57 25 07 00 74 EA 53 D0   ........ W%..t.S.
8350:  E0 D0 E0 8A E0 D0 E0 02  C4 32 E4 03 D8 FF 66 FA   ........ .2....f.
```

```
8360:  5B EB D5 83 7E 04 00 75  16 CD 37 E2 CD 35 6E FE   [...~..u ..7..5n.
8370:  C4 76 08 CD 3C DB 7C 02  26 C7 04 00 00 CD 3D 5F   .v..<.|. &.....=_
8380:  5E 8B E5 5D C2 08 00 CD  3C 9B 6F 02 CD 3A C9 EB   ^..].... <.o..:..
8390:  CF 2E FF 77 0A 2E FF 77  08 2E FF 77 06 2E FF 77   ...w...w ...w...w
83A0:  04 2E 8B 4F 02 2E 8B 07  3D 00 80 83 D1 FF 51 50   ...O.... =.....QP
83B0:  8B C4 FF 76 0A FF 76 08  16 50 E8 0B 00 83 C4 0C   ...v..v. .P......
83C0:  EB 9E E9 6C 01 E9 54 01  55 8B EC 83 EC 12 56 57   ...l..T. U.....VW
83D0:  B9 09 00 8C D0 8E C0 8D  7E EE 33 C0 F3 AB C5 76   ........ ~.3....v
83E0:  08 C4 7E 04 8B 44 0A 26  8B 5D 0A 8B C8 33 CB 81   ..~..D.& .]...3..
83F0:  E1 00 80 89 4E FE BA FF  7F 23 C2 3B C2 74 C3 23   ....N... .#.;.t.#
8400:  DA 3B DA 74 BD 8B D0 03  D3 81 FA FD BF 77 B3 81   .;.t.... .....w..
8410:  FA BF 3F 76 B0 0B C0 75  11 42 8B 04 0B 44 02 0B   ..?v...u .B...D..
8420:  44 04 0B 44 06 0B 44 08  74 9B 0B DB 75 16 42 26   D..D..D. t...u.B&
8430:  8B 05 26 0B 45 02 26 0B  45 04 26 0B 45 06 26 0B   ..&.E.&. E.&.E.&.
8440:  45 08 74 81 81 EA FE 3F  89 54 0A 83 C7 08 B9 05   E.t....? .T......
8450:  00 8D 5E EE 51 56 57 26  8B 05 F7 24 36 01 07 36   ..^.QVW& ...$6..6
8460:  11 57 02 36 83 57 04 00  83 C6 02 83 EF 02 E2 E7   .W.6.W.. ........
8470:  5F 5E 59 83 C3 02 83 C6  02 83 C1 FF 75 D6 8B 76   _^Y..... ....u..v
8480:  08 8B 56 F0 8B 4E F2 8B  5E F4 8B 46 F6 8B 7E F8   ..V..N.. ^..F..~.
8490:  83 7C 0A 00 7F 14 EB 5F  D1 66 EE D1 D2 D1 D1 D1   .|....._ .f......
84A0:  D3 D1 D0 D1 D7 FF 4C 0A  74 4D 0B FF 79 EA 81 7E   ......L. tM..y..~
84B0:  EE 00 80 72 1F 77 06 F7  C2 01 00 74 17 83 C2 01   ...r.w.. ...t....
84C0:  83 D1 00 83 D3 00 15 00  00 83 D7 00 73 06 BF 00   ........ ....s...
84D0:  80 FF 44 0A 81 7C 0A FF  7F 73 56 89 7C 08 89 44   ..D..|.. .sV.|..D
84E0:  06 89 5C 04 89 4C 02 89  14 8B 46 FE 09 44 0A 5F   ..\..L.. ..F..D._
84F0:  5E 8B E5 5D C2 08 00 FF  4C 0A D1 EF D1 D8 D1 DB   ^..].... L.......
8500:  D1 D9 D1 DA D1 5E EE 83  56 FC 00 FF 44 0A 75 EA   .....^.. V...D.u.
8510:  83 7E FC 00 74 98 83 4E  EE 01 EB 92 33 C0 89 44   .~..t..N ....3..D
8520:  0A 89 44 08 89 44 06 89  44 04 89 44 02 89 04 EB   ..D..D.. D..D....
8530:  BE B8 FF 7F 0B 46 FE 89  44 0A 33 C0 89 44 08 89   .....F.. D.3..D..
8540:  44 06 89 44 04 89 44 02  89 04 EB A3 00 55 8B EC   D..D..D. .....U..
8550:  83 EC 0C 56 57 8B 46 06  89 46 F4 C4 76 08 33 C0   ...VW.F. .F..v.3.
8560:  8B F8 8B D8 8B C8 8B D0  26 8A 14 46 EB 3A 89 7E   ........ &..F.:.~
8570:  FE 89 46 FC 89 5E FA 89  4E F8 89 56 F6 E8 7B 00   ..F..^.. N..V..{.
8580:  E8 78 00 03 56 F6 13 4E  F8 13 5E FA 13 46 FC 13   .x..V..N ..^..F..
8590:  7E FE E8 66 00 26 02 14  46 80 D6 00 83 D1 00 83   ~..f.&.. F.......
85A0:  D3 00 15 00 00 83 D7 00  FF 4E F4 75 C1 BE 4E 40   ........ .N.u..N@
85B0:  EB 0D 8B F8 8B C3 8B D9  8B CA 33 D2 83 EE 10 0B   ........ ..3.....
85C0:  FF 74 EF 78 0F D1 E2 D1  D1 D1 D3 D1 D0 D1 D7 4E   .t.x.... .......N
85D0:  0B FF 79 F1 56 8B 76 04  36 8F 44 0A 36 89 7C 08   ..y.V.v. 6.D.6.|.
85E0:  36 89 44 06 36 89 5C 04  36 89 4C 02 36 89 14 8B   6.D.6.\. 6.L.6...
85F0:  C6 8C D2 5F 5E 8B E5 5D  C2 08 00 D1 E2 D1 D1 D1   ..._^..] ........
8600:  D3 D1 D0 D1 D7 C3 00 55  8B EC 83 EC 0E 16 8D 46   .......U .......F
8610:  F6 50 FF 76 0C FF 76 0A  FF 76 08 FF 76 06 FF 76   .P.v..v. .v..v..v
8620:  04 E8 4B 00 CD 35 7E F2  CD 37 6E F6 8B 5E F2 83   ..K..5~. .7n..^..
8630:  CB 18 89 5E F4 CD 37 E2  C4 5E 0E CD 35 6E F4 CD   ...^..7. .^..5n..
8640:  3C DD 1F CD 39 7E F4 CD  37 E2 CD 35 6E F2 0B C0   <...9~.. 7..5n...
8650:  75 17 8B 5E F4 33 C0 F7  C3 18 00 74 0C B8 02 00   u..^.3.. ...t....
8660:  F7 C3 08 00 75 03 B8 01  00 8B E5 5D C2 0E 00 55   ....u... ...]...U
8670:  8B EC 83 EC 34 56 57 1E  C5 76 06 33 C0 89 46 F2   ....4VW. .v.3..F.
8680:  8C 5E F0 89 76 EE 89 46  EC 89 46 E8 89 46 EA C7   .^..v..F ..F..F..
8690:  46 E6 19 00 16 07 8D 7E  CC AC 3C 20 74 FB 3C 09   F......~ ..< t.<.
86A0:  74 F7 3C 0A 74 F3 3C 0D  74 EF 0A C0 75 03 E9 EF   t.<.t.<. t...u...
86B0:  01 3C 2B 74 09 3C 2D 75  06 C7 46 EC 00 80 AC 3C   .<+t.<-u ..F....<
```

```
86C0:  30 72 04 3C 39 76 10 3C  2E 75 E3 AC 3C 30 72 DE   0r.<9v.< .u..<0r.
86D0:  3C 39 77 DA EB 15 AC 3C  30 74 FB 0A C0 75 07 4E   <9w....< 0t...u.N
86E0:  89 76 EE E9 BE 01 3C 2E  75 12 AC FF 4E EA 3C 30   .v....<. u...N.<0
86F0:  74 F8 FF 46 EA 0A C0 74  E6 EB 2B AC 3C 30 72 21   t..F...t ..+.<0r!
8700:  3C 39 77 1D 2C 30 AA FF  4E E6 75 EF AC FF 46 EA   <9w.,0.. N.u...F.
8710:  3C 30 72 04 3C 39 76 F4  FF 4E EA 3C 2E 74 1A EB   <0r.<9v. .N.<.t..
8720:  21 3C 2E 75 1D AC 3C 30  72 18 3C 39 77 14 2C 30   !<.u..<0 r.<9w.,0
8730:  AA FF 4E EA FF 4E E6 75  EC AC 3C 30 72 04 3C 39   ..N..N.u ..<0r.<9
8740:  76 F7 F7 5E E6 83 46 E6  19 8D 5C FF 89 5E EE 33   v..^..F. ..\..^.3
8750:  DB 3C 45 74 0E 3C 65 74  0A 3C 44 74 06 3C 64 74   .<Et.<et .<Dt.<dt
8760:  02 EB 52 AC 3C 2B 74 09  3C 2D 75 06 C7 46 E8 FF   ..R.<+t. <-u..F..
8770:  FF AC 3C 30 72 3F 3C 39  77 3B 2D 30 00 8B D8 AC   ..<0r?<9 w;-0....
8780:  3C 30 72 24 3C 39 77 20  2C 30 81 FB 66 06 77 0C   <0r$<9w  ,0..f.w.
8790:  D1 E3 03 C3 D1 E3 D1 E3  03 D8 79 E3 BB FF 3F AC   ........ ..y...?.
87A0:  3C 30 72 04 3C 39 76 F7  33 5E E8 2B 5E E8 01 5E   <0r.<9v. 3^.+^..^
87B0:  EA 4E 89 76 EE 83 7E E6  00 75 03 E9 E6 00 26 C6   .N.v..~. .u....&.
87C0:  05 00 4F 83 7E E6 18 76  17 26 8A 05 26 C6 05 00   ..O.~..v .&..&...
87D0:  FF 4E E6 FF 46 EA 4F 3C  05 72 14 26 FE 05 EB 15   .N..F.O< .r.&....
87E0:  83 7E EA 00 74 0F EB 07  4F FF 4E E6 FF 46 EA 26   .~..t... O.N..F.&
87F0:  80 3D 00 74 F3 16 8D 46  CC 50 FF 76 E6 8D 46 F4   .=.t...F .P.v..F.
8800:  50 E8 49 FD 8B 46 EA 0B  C0 74 1E 3D 50 14 7C 03   P.I..F.. .t.=P.|.
8810:  E9 A3 00 3D B0 EB 7F 03  E9 95 00 16 8D 46 F4 50   ...=.... .....F.P
8820:  FF 76 EA FF 76 04 E8 CA  FA 8B 46 FC 8B 5E FA 8B   .v..v... ..F..^..
8830:  4E F8 8B 56 F6 81 7E F4  00 80 72 1C 77 06 F7 C2   N..V..~. ..r.w...
8840:  01 00 74 14 83 C2 01 83  D1 00 83 D3 00 15 00 00   ..t..... ........
8850:  73 06 80 CC 80 FF 46 FE  8B 76 FE 81 FE FF 7F 73   s.....F. .v.....s
8860:  55 0B F6 75 0A 8B F0 0B  F3 0B F1 0B F2 74 41 C5   U..u.... .....tA.
8870:  76 0E 89 44 06 89 5C 04  89 4C 02 89 14 8B 46 FE   v..D..\. .L....F.
8880:  0B 46 EC 89 44 08 C5 76  0A 8B 46 EE 89 04 8B 46   .F..D..v ..F....F
8890:  F0 89 44 02 8B 46 F2 1F  5F 5E 8B E5 5D C2 0E 00   ..D..F.. _^..]...
88A0:  83 4E F2 04 C4 7E 0E 33  C0 B9 05 00 F3 AB EB D6   .N...~.3 ........
88B0:  83 4E F2 01 EB EE 83 4E  F2 02 C5 76 0E B8 FF 7F   .N.....N ...v....
88C0:  0B 46 EC 89 44 08 C7 44  06 00 80 33 C0 89 44 04   .F..D..D ...3..D.
88D0:  89 44 02 89 04 EB AF 55  8B EC 83 EC 0A C4 5E 06   .D.....U ......^.
88E0:  26 8A 07 98 8B D8 F6 87  A3 0A 01 74 06 8D 47 20   &....... ...t..G
88F0:  EB 08 90 8B 5E 06 26 8A  07 98 3D 65 00 74 13 FF   ....^.&. ..=e.t..
8900:  46 06 C4 5E 06 26 8A 07  98 8B D8 F6 87 A3 0A 04   F..^.&.. ........
8910:  75 ED C4 5E 06 26 8A 07  88 46 FE 26 C6 07 2E FF   u..^.&.. .F.&....
8920:  46 06 C4 5E 06 26 8A 07  88 46 FC 8A 46 FE 26 88   F..^.&.. .F..F.&.
8930:  07 8A 46 FC 88 46 FE C4  5E 06 FF 46 06 26 80 3F   ..F..F.. ^..F.&.?
8940:  00 75 DF 8B E5 5D CB 55  8B EC 83 EC 08 EB 09 26   .u...].U .......&
8950:  80 3F 2E 74 0C FF 46 06  C4 5E 06 26 80 3F 00 75   .?.t..F. .^.&.?.u
8960:  EE FF 46 06 26 80 3F 00  74 56 EB 10 90 26 80 3F   ..F.&.?. tV...&.?
8970:  65 74 12 26 80 3F 45 74  0C FF 46 06 8B 5E 06 26   et.&.?Et ..F..^.&
8980:  80 3F 00 75 E8 8B C3 8C  C2 FF 4E 06 89 46 FC 89   .?.u.... ..N..F..
8990:  56 FE EB 04 90 FF 4E 06  8B 5E 06 26 80 3F 30 74   V.....N. .^.&.?0t
89A0:  F4 26 80 3F 2E 75 03 FF  4E 06 C4 5E FC FF 46 FC   .&.?.u.. N..^..F.
89B0:  26 8A 07 FF 46 06 C4 5E  06 26 88 07 0A C0 75 EA   &...F..^ .&....u.
89C0:  8B E5 5D CB 90 55 8B EC  83 EC 02 C4 5E 06 CD 3C   ..]..U.. ....^..<
89D0:  DD 07 CD 38 16 74 0D CD  39 D8 CD 39 7E FE CD 3D   ...8.t.. 9..9~..=
89E0:  8A 66 FF 9E 72 07 B8 01  00 8B E5 5D CB 2B C0 8B   .f..r... ...].+..
89F0:  E5 5D CB 55 8B EC 57 56  8B 46 06 48 74 41 48 74   .].U..WV .F.HtAHt
8A00:  20 FF 76 0E FF 76 0C 9A  E0 26 35 04 83 C4 04 8E    .v..v.. .&5.....
8A10:  C2 8B D8 CD 3C DD 07 C4  5E 08 CD 3C D9 1F EB 16   ....<... ^..<....
```

```
8A20:  90 FF 76 0E FF 76 0C 9A  44 50 35 04 83 C4 04 C4   ..v..v.. DP5.....
8A30:  5E 08 CD 3C DB 3F CD 3D  5E 5F 8B E5 5D CB 90 FF   ^..<.?.= ^_..]...
8A40:  76 0E FF 76 0C 9A E0 26  35 04 83 C4 04 8B F0 1E   v..v...& 5.......
8A50:  8E DA C4 7E 08 A5 A5 A5  A5 1F 5E 5F 8B E5 5D CB   ...~.... ..^_..].
8A60:  90 55 8B EC 83 EC 0A 57  56 80 3E B0 0C 00 74 39   .U.....W V.>...t9
8A70:  C4 1E 0A 14 89 5E FC 8C  46 FE 26 83 3F 2D 75 05   .....^.. F.&.?-u.
8A80:  B8 01 00 EB 02 2B C0 03  46 0A 8B 56 0C 89 46 F8   .....+.. F..V..F.
8A90:  89 56 FA 52 50 83 7E 0E  00 7E 06 B8 01 00 EB 03   .V.RP.~. .~......
8AA0:  90 2B C0 50 E8 22 04 EB  5B C4 5E 06 26 FF 77 06   .+.P.".. [.^.&.w.
8AB0:  26 FF 77 04 26 FF 77 02  26 FF 37 9A 90 4B 35 04   &.w.&.w. &.7..K5.
8AC0:  83 C4 08 89 46 FC 89 56  FE 52 50 8B 46 0E 40 50   ....F..V .RP.F.@P
8AD0:  83 7E 0E 00 7E 05 B8 01  00 EB 02 2B C0 C4 5E FC   .~..~... ...+..^.
8AE0:  89 46 F6 26 83 3F 2D 75  06 B8 01 00 EB 03 90 2B   .F.&.?-u .......+
8AF0:  C0 03 46 F6 03 46 0A 8B  56 0C 52 50 9A AA 27 35   ..F..F.. V.RP..'5
8B00:  04 83 C4 0A 8B 46 0A 8B  56 0C 89 46 F8 89 56 FA   .....F.. V..F..V.
8B10:  C4 5E FC 26 83 3F 2D 75  0C 8E C2 8B D8 26 C6 07   .^.&.?-u .....&..
8B20:  2D 40 89 46 F8 83 7E 0E  00 7E 12 C4 5E F8 26 8A   -@.F..~. .~..^.&.
8B30:  47 01 26 88 07 43 89 5E  F8 26 C6 07 2E B8 AA 0C   G.&..C.^ .&......
8B40:  1E 50 80 3E B0 0C 01 1B  C0 F7 D8 03 46 F8 8B 56   .P.>.... ....F..V
8B50:  FA 03 46 0E 52 50 9A FE  25 35 04 83 C4 08 89 46   ..F.RP.. %5.....F
8B60:  F8 89 56 FA 83 7E 10 00  74 07 C4 5E F8 26 C6 07   ..V..~.. t..^.&..
8B70:  45 FF 46 F8 C4 5E FC 26  C4 7F 06 26 80 3D 30 74   E.F..^.& ...&.=0t
8B80:  5C 8E 46 FE 26 8B 77 02  4E 79 0D 8B C6 F7 D8 8B   \.F.&.w. Ny......
8B90:  F0 C4 5E F8 26 C6 07 2D  FF 46 F8 83 FE 64 7C 15   ..^.&..- .F...d|.
8BA0:  8B C6 B9 64 00 99 F7 F9  C4 5E F8 26 00 07 8B C6   ...d.... .^.&....
8BB0:  99 F7 F9 8B F2 FF 46 F8  83 FE 0A 7C 15 8B C6 B9   ......F. ...|....
8BC0:  0A 00 99 F7 F9 C4 5E F8  26 00 07 8B C6 99 F7 F9   ......^. &.......
8BD0:  8B F2 8B C6 FF 46 F8 C4  5E F8 26 00 07 8B 46 0A   .....F.. ^.&...F.
8BE0:  8B 56 0C 5E 5F 8B E5 5D  CB 55 8B EC 83 EC 04 C6   .V.^_..] .U......
8BF0:  06 B0 0C 01 FF 76 10 FF  76 0E FF 76 0C FF 76 0A   .....v.. v..v..v.
8C00:  FF 76 08 FF 76 06 0E E8  57 FE C6 06 B0 0C 00 8B   .v..v... W.......
8C10:  E5 5D CB 55 8B EC 83 EC  0E 56 80 3E B0 0C 00 74   .].U.... .V.>...t
8C20:  40 C4 1E 0A 14 89 5E FC  8C 46 FE 26 83 3F 2D 75   @.....^. .F.&.?-u
8C30:  06 B8 01 00 EB 03 90 2B  C0 03 46 0A 8B 56 0C 89   .......+ ..F..V..
8C40:  46 F2 89 56 F4 8B 0E B2  0C 39 4E 0E 75 5D 8E C2   F..V.... .9N.u]..
8C50:  8B D8 8B F1 26 C6 00 30  03 DE 43 26 C6 07 00 EB   ....&..0 ..C&....
8C60:  4A C4 5E 06 26 FF 77 06  26 FF 77 04 26 FF 77 02   J.^.&.w. &.w.&.w.
8C70:  26 FF 37 9A 90 4B 35 04  83 C4 08 89 46 FC 89 56   &.7..K5. ....F..V
8C80:  FE 52 50 C4 5E FC 26 8B  47 02 03 46 0E 50 26 83   .RP.^.&. G..F.P&.
8C90:  3F 2D 75 05 B8 01 00 EB  02 2B C0 03 46 0A 8B 56   ?-u..... .+..F..V
8CA0:  0C 52 50 9A AA 27 35 04  83 C4 0A 8B 46 0A 8B 56   .RP..'5. ....F..V
8CB0:  0C 89 46 F2 89 56 F4 C4  5E FC 26 83 3F 2D 75 0C   ..F..V.. ^.&.?-u.
8CC0:  8E C2 8B D8 26 C6 07 2D  40 89 46 F2 C4 5E FC 26   ....&..- @.F..^.&
8CD0:  83 7F 02 00 7F 19 FF 76  F4 FF 76 F2 B8 01 00 50   .......v ..v....P
8CE0:  E8 E6 01 C4 5E F2 26 C6  07 30 FF 46 F2 EB 07 26   ....^.&. .0.F...&
8CF0:  8B 47 02 01 46 F2 83 7E  0E 00 7E 61 FF 76 F4 FF   .G..F..~ ..~a.v..
8D00:  76 F2 B8 01 00 50 E8 C0  01 C4 5E F2 26 C6 07 2E   v....P.. ..^.&...
8D10:  FF 46 F2 C4 5E FC 26 83  7F 02 00 7D 40 80 3E B0   .F..^.&. ...}@.>.
8D20:  0C 00 74 09 26 8B 47 02  F7 D8 EB 0F 90 26 8B 47   ..t.&.G. .....&.G
8D30:  02 F7 D8 3B 46 0E 7E 03  8B 46 0E 89 46 0E FF 76   ...;F.~. .F..F..v
8D40:  F4 FF 76 F2 50 E8 81 01  FF 76 0E B8 30 00 50 FF   ..v.P... .v..0.P.
8D50:  76 F4 FF 76 F2 9A 18 32  35 04 83 C4 08 8B 46 0A   v..v...2 5.....F.
8D60:  8B 56 0C 5E 8B E5 5D CB  90 55 8B EC 83 EC 04 C6   .V.^..]. .U......
8D70:  06 B0 0C 01 FF 76 0E FF  76 0C FF 76 0A FF 76 08   .....v.. v..v..v.
```

```
8D80:  FF 76 06 0E E8 8C FE C6  06 B0 0C 00 8B E5 5D CB   .v...... ......].
8D90:  90 55 8B EC 83 EC 0A C4  5E 06 26 FF 77 06 26 FF   .U...... ^.&.w.&.
8DA0:  77 04 26 FF 77 02 26 FF  37 9A 90 4B 35 04 83 C4   w.&.w.&. 7..K5...
8DB0:  08 A3 0A 14 89 16 0C 14  C4 1E 0A 14 26 8B 47 02   ........ ....&.G.
8DC0:  48 A3 B2 0C 06 53 FF 76  0E 26 83 3F 2D 75 06 B8   H....S.v .&.?-u..
8DD0:  01 00 EB 03 90 2B C0 03  46 0A 8B 56 0C 89 46 FC   .....+.. F..V..F.
8DE0:  89 56 FE 52 50 9A AA 27  35 04 83 C4 0A C4 1E 0A   .V.RP..' 5.......
8DF0:  14 26 8B 47 02 48 89 46  FA 3B 06 B2 0C 7E 04 B0   .&.G.H.F .;...~..
8E00:  01 EB 02 2A C0 A2 B4 0C  8B 46 FA A3 B2 0C 3D FC   ...*.... .F....=.
8E10:  FF 7C 05 3B 46 0E 7C 1D  FF 76 10 FF 76 0E FF 76   .|.;F.|. .v..v..v
8E20:  0C FF 76 0A FF 76 08 FF  76 06 0E E8 BB FD 83 C4   ..v..v.. v.......
8E30:  0C 8B E5 5D CB 80 3E B4  0C 00 74 14 C4 5E FC FF   ...]..>. ..t..^..
8E40:  46 FC 26 80 3F 00 75 F4  8B 5E FC 26 C6 47 FE 00   F.&.?.u. .^.&.G..
8E50:  FF 76 0E FF 76 0C FF 76  0A FF 76 08 FF 76 06 0E   .v..v..v ..v..v..
8E60:  E8 06 FF 8B E5 5D CB 55  8B EC 83 7E 0E 65 74 06   .....].U ...~.et.
8E70:  83 7E 0E 45 75 1D FF 76  12 FF 76 10 FF 76 0C FF   .~.Eu..v ..v..v..
8E80:  76 0A FF 76 08 FF 76 06  0E E8 D5 FB 8B E5 8B E5   v..v..v. ........
8E90:  5D CB 90 83 7E 0E 66 75  16 FF 76 10 FF 76 0C FF   ]...~.fu ..v..v..
8EA0:  76 0A FF 76 08 FF 76 06  0E E8 67 FD EB DE 90 FF   v..v..v. ..g.....
8EB0:  76 12 FF 76 10 FF 76 0C  FF 76 0A FF 76 08 FF 76   v..v..v. .v..v..v
8EC0:  06 0E E8 CC FE 8B E5 5D  CB 55 8B EC 83 7E 04 00   .......] .U...~..
8ED0:  74 25 FF 76 08 FF 76 06  9A 5E 26 35 04 8B E5 40   t%.v..v. .^&5...@
8EE0:  50 FF 76 08 FF 76 06 8B  46 06 8B 56 08 03 46 04   P.v..v.. F..V..F.
8EF0:  52 50 9A F0 30 35 04 8B  E5 5D C2 06 00 16 07 55   RP..05.. .].....U
8F00:  8B EC CD 3C D9 07 CD 3D  8B E5 5D CB 16 07 55 8B   ...<...= ..]...U.
8F10:  EC CD 3C D9 1F CD 3D 8B  E5 5D CB 16 07 55 8B EC   ..<...=. .]...U..
8F20:  CD 3C D9 17 CD 3D 8B E5  5D CB 16 07 55 8B EC CD   .<...=.. ]...U...
8F30:  3C D8 07 CD 3D 8B E5 5D  CB 16 07 55 8B EC CD 3C   <...=..] ...U...<
8F40:  D8 0F CD 3D 8B E5 5D CB  16 07 55 8B EC CD 3C D8   ...=..]. ..U...<.
8F50:  27 CD 3D 8B E5 5D CB 16  07 55 8B EC CD 3C D8 2F   '.=..].. .U...<./
8F60:  CD 3D 8B E5 5D CB 16 07  55 8B EC CD 3C D8 37 CD   .=..]... U...<.7.
8F70:  3D 8B E5 5D CB 16 07 55  8B EC CD 3C D8 3F CD 3D   =..]...U ...<.?.=
8F80:  8B E5 5D CB 16 07 55 8B  EC CD 3C DD 07 CD 3D 8B   ..]...U. ..<...=.
8F90:  E5 5D CB 16 07 55 8B EC  CD 3C DD 1F CD 3D 8B E5   .]...U.. .<...=..
8FA0:  5D CB 16 07 55 8B EC CD  3C DD 17 CD 3D 8B E5 5D   ]...U... <...=..]
8FB0:  CB 16 07 55 8B EC CD 3C  DC 07 CD 3D 8B E5 5D CB   ...U...< ...=..].
8FC0:  16 07 55 8B EC CD 3C DC  0F CD 3D 8B E5 5D CB 16   ..U...<. ..=..]..
8FD0:  07 55 8B EC CD 3C DC 27  CD 3D 8B E5 5D CB 16 07   .U...<.' .=..]...
8FE0:  55 8B EC CD 3C DC 2F CD  3D 8B E5 5D CB 16 07 55   U...<./. =..]...U
8FF0:  8B EC CD 3C DC 37 CD 3D  8B E5 5D CB 16 07 55 8B   ...<.7.= ..]...U.
9000:  EC CD 3C DC 3F CD 3D 8B  E5 5D CB 16 07 55 8B EC   ..<.?.=. .]...U..
9010:  CD 3C DF 07 CD 3D 8B E5  5D CB 16 07 55 8B EC CD   .<...=.. ]...U...
9020:  3C DB 07 CD 3D 8B E5 5D  CB 16 07 55 8B EC CD 3C   <...=..] ...U...<
9030:  DF 2F CD 3D 8B E5 5D CB  00 55 8B EC 83 EC 0C 53   ./.=..]. .U.....S
9040:  51 56 57 CD 35 7E FE CD  3D 8B 46 FE 80 CC 0C 89   QVW.5~.. =.F.....
9050:  46 FC CD 35 6E FC CD 3B  7E F4 CD 35 6E FE 8B 46   F..5n..; ~..5n..F
9060:  F4 8B 56 F6 5F 5E 59 5B  8B E5 5D CB 00 55 8B EC   ..V._^Y[ ..]..U..
9070:  83 EC 06 B8 16 14 1E 50  8D 46 FA 16 50 FF 76 08   .......P .F..P.v.
9080:  FF 76 06 2B C0 50 E8 7E  F5 89 46 FE 8B 46 FA 2B   .v.+.P.~ ..F..F.+
9090:  46 06 A3 10 14 C7 06 0E  14 00 00 F6 46 FE 04 74   F....... ....F..t
90A0:  06 C7 06 0E 14 00 02 F6  46 FE 02 74 05 80 0E 0E   ........ F..t....
90B0:  14 01 F6 46 FE 01 74 05  80 0E 0F 14 01 B8 0E 14   ...F..t. ........
90C0:  8C DA 8B E5 5D CB 90 55  8B EC 56 57 FC 8C D8 8E   ....]..U ..VW....
90D0:  C0 8D 76 06 BF C0 0C 36  A5 36 A5 36 A5 36 A5 BE   ..v....6 .6.6.6..
```

```
90E0:  C0 0C 55 E8 31 EA 5D BF  C8 0C 8B C8 AC 98 91 F3   ..U.1.]. ........
90F0:  A4 91 AA BF B6 0C 32 FF  89 1D 89 55 02 89 4D 04   ......2. ...U..M.
9100:  C7 45 06 C8 0C 8C 5D 08  8C DA 8B C7 5F 5E 8B E5   .E....]. ...._^..
9110:  5D CB 00 5A 5A BA 80 18  8E DA 2A E4 50 2D 81 00   ]..ZZ... ..*.P-..
9120:  A3 FA 0C 9A A2 02 35 04  8B 1E FA 0C D1 E3 8B 8F   ......5. ........
9130:  DC 0C BB F4 0C 89 4F 04  9A D2 32 35 04 B8 FD 00   ......O. ..25....
9140:  50 9A 8B 05 35 04 A1 FA  0C 05 65 00 50 9A 8B 05   P...5... ..e.P...
9150:  35 04 9A DF 01 35 04 56  57 8C D8 8E C0 BE FC 0C   5....5.V W.......
9160:  BF 84 0A B9 0C 00 F3 A5  5F 5E CB 55 8B EC 83 EC   ........ _^.U....
9170:  1A C4 5E 06 26 FF 77 08  26 FF 77 06 26 FF 77 04   ..^.&.w. &.w.&.w.
9180:  26 FF 77 02 26 FF 37 8B  46 0E 40 3D 01 00 7D 03   &.w.&.7. F.@=..}.
9190:  B8 01 00 50 2B C0 50 8D  46 E6 50 E8 8F EC FF 76   ...P+.P. F.P....v
91A0:  10 FF 76 0E FF 76 0C FF  76 0A 8D 46 E6 16 50 0E   ..v..v.. v..F..P.
91B0:  E8 04 00 8B E5 5D CB 55  8B EC 83 EC 0C 8B 46 0A   .....].U ......F.
91C0:  8B 56 0C 89 46 FC 89 56  FE 8B 4E 06 8B 5E 08 83   .V..F..V ..N..^..
91D0:  C1 04 89 4E F6 89 5E F8  C4 5E 06 26 80 7F 02 2D   ...N..^. .^.&...-
91E0:  75 0C 8E C2 8B D8 26 C6  07 2D 40 89 46 FC C4 5E   u.....&. .-@.F..^
91F0:  06 26 80 7F 03 00 74 15  C4 5E F6 FF 46 F6 26 8A   .&....t. .^..F.&.
9200:  07 C4 5E FC FF 46 FC 26  88 07 EB 15 90 C4 5E FC   ..^..F.& ......^.
9210:  FF 46 FC 26 C6 07 30 C4  5E 06 26 FE 47 03 26 FF   .F.&..0. ^.&.G.&.
9220:  07 83 7E 0E 00 7E 49 C4  5E FC FF 46 FC 26 C6 07   ..~..~I. ^..F.&..
9230:  2E C4 5E 06 26 8A 47 03  98 48 89 46 FA 29 46 0E   ..^.&.G. .H.F.)F.
9240:  EB 16 90 C4 5E F6 FF 46  F6 26 8A 07 C4 5E FC FF   ....^..F .&...^..
9250:  46 FC 26 88 07 FF 4E FA  83 7E FA 00 75 E5 EB 0B   F.&...N. .~..u...
9260:  90 C4 5E FC FF 46 FC 26  C6 07 30 FF 4E 0E 79 F1   ..^..F.& ..0.N.y.
9270:  83 7E 10 00 74 0D C4 5E  FC FF 46 FC 26 C6 07 45   .~..t..^ ..F.&..E
9280:  EB 0B 90 C4 5E FC FF 46  FC 26 C6 07 65 C4 5E 06   ....^..F .&..e.^.
9290:  26 8B 07 48 89 46 F4 0B  C0 7D 12 F7 D8 89 46 F4   &..H.F.. .}....F.
92A0:  C4 5E FC FF 46 FC 26 C6  07 2D EB 0B 90 C4 5E FC   .^..F.&. .-....^.
92B0:  FF 46 FC 26 C6 07 2B 3D  E8 03 7C 1A B9 E8 03 99   .F.&..+= ..|.....
92C0:  F7 F9 04 30 8B 5E FC FF  46 FC 26 88 07 8B 46 F4   ...0.^.. F.&...F.
92D0:  99 F7 F9 89 56 F4 8B 46  F4 B9 64 00 99 F7 F9 04   ....V..F ..d.....
92E0:  30 8B 5E FC FF 46 FC 26  88 07 8B 46 F4 99 F7 F9   0.^..F.& ...F....
92F0:  89 56 F4 8B C2 B9 0A 00  99 F7 F9 04 30 8B 5E FC   .V...... ....0.^.
9300:  FF 46 FC 26 88 07 8B 46  F4 99 F7 F9 80 C2 30 8B   .F.&...F ......0.
9310:  5E FC FF 46 FC 26 88 17  8B 5E FC FF 46 FC 26 C6   ^..F.&.. .^..F.&.
9320:  07 00 8B 46 0A 8B 56 0C  8B E5 5D CB 90 55 8B EC   ...F..V. ..]..U..
9330:  83 EC 1A C4 5E 06 26 FF  77 08 26 FF 77 06 26 FF   ....^.&. w.&.w.&.
9340:  77 04 26 FF 77 02 26 FF  37 8B 46 0E 0B C0 7D 02   w.&.w.&. 7.F...}.
9350:  2B C0 50 B8 01 00 50 8D  46 E6 50 E8 CF EA FF 76   +.P...P. F.P....v
9360:  0E FF 76 0C FF 76 0A 8D  46 E6 16 50 0E E8 05 00   ..v..v.. F..P....
9370:  8B E5 5D CB 90 55 8B EC  83 EC 0E 8B 46 0A 8B 56   ..]..U.. ....F..V
9380:  0C 89 46 FC 89 56 FE C4  5E 06 26 8B 0F 89 4E F4   ..F..V.. ^.&...N.
9390:  8D 4F 04 89 4E F6 8C 46  F8 26 80 7F 02 2D 75 0F   .O..N..F .&...-u.
93A0:  8E C2 8B D8 26 C6 07 2D  40 89 46 FC 89 56 FE 83   ....&..- @.F..V..
93B0:  7E F4 00 7E 52 C4 5E 06  26 8A 47 03 98 3B 46 F4   ~..~R.^. &.G..;F.
93C0:  7E 03 8B 46 F4 89 46 FA  29 46 F4 8A 46 FA 26 28   ~..F..F. )F..F.&(
93D0:  47 03 EB 13 90 C4 5E F6  FF 46 F6 26 8A 07 C4 5E   G.....^. .F.&...^
93E0:  FC FF 46 FC 26 88 07 8B  46 FA FF 4E FA 0B C0 75   ..F.&... F..N...u
93F0:  E4 83 7E F4 00 74 1A FF  4E F4 C4 5E FC FF 46 FC   ..~..t.. N..^..F.
9400:  26 C6 07 30 EB EB 90 C4  5E FC FF 46 FC 26 C6 07   &..0.... ^..F.&..
9410:  30 83 7E 0E 00 7E 70 C4  5E FC FF 46 FC 26 C6 07   0.~..~p. ^..F.&..
9420:  2E C4 5E 06 26 8A 47 03  98 2B 46 F4 F7 D8 01 46   ..^.&.G. .+F....F
9430:  0E EB 0A C4 5E FC FF 46  FC 26 C6 07 30 8B 46 F4   ....^..F .&..0.F.
```

```
9440:  FF 46 F4 0B C0 7C EC C4  5E 06 26 8A 47 03 98 89   .F...|.. ^.&.G...
9450:  46 FA EB 13 90 C4 5E F6  FF 46 F6 26 8A 07 C4 5E   F.....^. .F.&...^
9460:  FC FF 46 FC 26 88 07 8B  46 FA FF 4E FA 0B C0 75   ..F.&... F..N...u
9470:  E4 EB 0A C4 5E FC FF 46  FC 26 C6 07 30 8B 46 0E   ....^..F .&..0.F.
9480:  FF 4E 0E 0B C0 7F EC C4  5E FC 26 C6 07 00 8B 46   .N...... ^.&....F
9490:  0A 8B 56 0C 8B E5 5D CB  90 55 8B EC 83 EC 1A 83   ..V...]. .U......
94A0:  7E 0E 00 7F 05 C7 46 0E  01 00 C4 5E 06 26 FF 77   ~.....F. ...^.&.w
94B0:  08 26 FF 77 06 26 FF 77  04 26 FF 77 02 26 FF 37   .&.w.&.w .&.w.&.7
94C0:  FF 76 0E 2B C0 50 8D 46  E6 50 E8 60 E9 83 7E E6   .v.+.P.F .P.`..~.
94D0:  FC 7E 08 8B 46 E6 39 46  0E 7D 1E FF 76 10 8B 46   .~..F.9F .}..v..F
94E0:  0E 48 50 FF 76 0C FF 76  0A 8D 46 E6 16 50 0E E8   .HP.v..v ..F..P..
94F0:  C5 FC 83 C4 0C 8B E5 5D  CB 8B 46 0E 2B 46 E6 50   .......] ..F.+F.P
9500:  FF 76 0C FF 76 0A 8D 46  E6 16 50 0E E8 66 FE 8B   .v..v..F ..P..f..
9510:  E5 5D CB 55 8B EC 83 7E  0E 65 74 06 83 7E 0E 45   .].U...~ .et..~.E
9520:  75 1D FF 76 12 FF 76 10  FF 76 0C FF 76 0A FF 76   u..v..v. .v..v..v
9530:  08 FF 76 06 0E E8 33 FC  8B E5 8B E5 5D CB 90 83   ..v...3. ....]...
9540:  7E 0E 66 74 06 83 7E 0E  46 75 16 FF 76 10 FF 76   ~.ft..~. Fu..v..v
9550:  0C FF 76 0A FF 76 08 FF  76 06 0E E8 CF FD EB D8   ..v..v.. v.......
9560:  90 FF 76 12 FF 76 10 FF  76 0C FF 76 0A FF 76 08   ..v..v.. v..v..v.
9570:  FF 76 06 0E E8 22 FF 8B  E5 5D CB 55 8B EC 83 EC   .v...".. .].U....
9580:  0E 8D 46 F6 16 50 8D 4E  F2 16 51 FF 76 08 FF 76   ..F..P.N ..Q.v..v
9590:  06 B9 01 00 51 E8 D7 F0  CD 37 6E F6 8B E5 5D CB   ....Q... .7n...].
95A0:  90 00 00 00 00 00 00 AB  0B 2A 15 B2 00 0E 00 B0   ........ .*......
95B0:  4D 53 45 4D 38 37 06 00  67 66 77 2E 2E 2E 47 57   MSEM87.. gfw...GW
95C0:  5C 00 CF 01 AE 01 F0 01  EE 06 07 07 29 07 6E 07   \....... ....).n.
95D0:  0B 07 DE 01 56 02 95 02  9A 02 83 FB 0C 77 0F D1   ....V... .....w..
95E0:  E3 1E 2E 8E 1E 00 00 2E  FF 97 20 00 1F CB 0D FF   ........ .. .....
95F0:  FF 8B D0 EB F8 4E 4F 38  37 3D 0D 0A 16 1E B8 56   .....NO8 7=.....V
9600:  00 50 9A 13 29 35 04 1E  B8 14 00 50 9A F5 28 35   .P..)5.. ...P..(5
9610:  04 1E 0B F6 74 72 8E C6  0E 1F 33 FF FC 26 80 3D   ....tr.. ..3..&.=
9620:  00 74 65 B9 05 00 BE 55  00 F3 A6 74 0B B9 FF 7F   .te....U ...t....
9630:  32 C0 F2 AE 74 E7 EB 50  B9 FF 7F B0 20 F3 AE 4F   2...t..P .... ..O
9640:  26 8A 15 0A D2 74 38 33  C0 B9 FF 7F 8B DF F2 AE   &....t83 ........
9650:  4F 2B FB 8B CF 8B FB 50  8B C4 BB 01 00 53 06 57   O+.....P .....S.W
9660:  51 16 50 9A 32 29 35 04  8B C4 BB 01 00 53 0E BF   Q.P.2)5. .....S..
9670:  5A 00 57 BB 02 00 53 16  50 9A 32 29 35 04 5B 1F   Z.W...S. P.2)5.[.
9680:  C6 06 04 00 00 EB 7F 90  1F 83 3E 14 00 00 75 42   ........ ..>...uB
9690:  DB E3 51 B9 14 00 E2 FE  59 33 C0 A3 58 00 D9 3E   ..Q..... Y3..X..>
96A0:  58 00 51 B9 14 00 E2 FE  59 81 26 58 00 3F 0F 81   X.Q..... Y.&X.?..
96B0:  3E 58 00 3F 03 75 12 DD  3E 58 00 51 B9 14 00 E2   >X.?.u.. >X.Q....
96C0:  FE 59 40 F7 06 58 00 BF  B8 74 02 33 C0 A2 04 00   .Y@..X.. .t.3....
96D0:  EB 0D 1E 68 04 00 6A 03  6A 00 9A DE 28 35 04 80   ...h..j. j...(5..
96E0:  3E 04 00 00 74 20 83 3E  14 00 00 75 0A E8 2A 25   >...t .> ...u..*%
96F0:  73 14 B8 FE FF F9 C3 6A  10 0E 68 B8 02 1E 68 22   s......j ..h...h"
9700:  00 9A 0A 29 35 04 83 3E  14 00 00 75 05 E8 88 00   ...)5..> ...u....
9710:  EB 16 80 3E 04 00 00 75  0F 6A 07 0E 68 98 0C 1E   ...>...u .j..h...
9720:  68 1E 00 9A 0A 29 35 04  E8 44 00 B8 32 13 E8 5D   h....)5. .D..2..]
9730:  05 33 C0 A3 00 00 A3 02  00 B8 98 0E 83 3E 14 00   .3...... .....>..
9740:  00 74 03 B8 D1 0E A3 A7  00 A0 04 00 98 C3 83 3E   .t...... .......>
9750:  14 00 00 75 10 E8 88 00  80 3E 04 00 00 74 05 DB   ...u.... .>...t..
9760:  E3 E8 E5 24 C3 FF 36 56  00 9A 29 29 35 04 C3 80   ...$..6V ..))5...
9770:  3E 04 00 00 74 02 DB E3  A1 0E 00 A3 10 00 33 C0   >...t... ......3.
9780:  3A 06 04 00 74 03 9B DB  E2 A3 0C 00 A3 08 00 C3   :...t... ........
9790:  A3 00 00 89 16 02 00 C3  B9 0B 00 B8 34 35 BF 1E   ........ ....45..
```

```
97A0:  00 CD 21 40 89 1D 8C 45  02 83 C7 04 E2 F3 BA BC   ..!@...E ........
97B0:  0C BE 45 0C BF 28 0C 80  3E 04 00 00 74 09 BA 33   ..E..(.. >...t..3
97C0:  08 BE FE 07 BF 2B 08 1E  0E 1F B8 34 25 B9 08 00   .....+.. ...4%...
97D0:  CD 21 40 E2 FB 8B D6 CD  21 40 8B D7 CD 21 1F C3   .!@..... !@...!..
97E0:  B9 0B 00 B8 34 25 BF 1E  00 1E C5 15 CD 21 1F 40   ....4%.. .....!.@
97F0:  83 C7 04 E2 F4 C3 33 D2  80 3E 04 00 00 74 28 83   ......3. .>...t(.
9800:  EC 0E 8B DC 9B 36 D9 37  9B 36 D9 2F 36 8B 47 04   .....6.7 .6./6.G.
9810:  83 C4 0E B9 08 00 8B D8  D1 E8 D1 E8 83 E3 03 83   ........ ........
9820:  FB 03 74 01 42 E2 EF A1  10 00 2B 06 0E 00 B3 0C   ..t.B... ..+.....
9830:  F6 F3 03 C2 C3 A0 04 00  98 C3 A3 A4 00 C3 80 0E   ........ ........
9840:  17 00 02 80 3E 04 00 00  74 03 80 CC 02 C3 80 0E   ....>... t.......
9850:  17 00 04 C3 CF 43 EB 19  50 55 83 EC 1C 8B EC 9B   .....C.. PU......
9860:  D9 76 00 B8 B4 02 87 46  20 89 46 02 53 1E C5 5E   .v.....F  .F.S..^
9870:  06 8B 07 04 28 73 DE 86  C4 89 46 08 EB 10 50 55   ....(s.. ..F...PU
9880:  83 EC 1C 8B EC D9 76 00  9B DB E2 FB 53 1E 2E 8E   ......v. ....S...
9890:  1E 00 00 33 C0 8A 46 02  32 FF 83 3E A4 00 00 75   ...3..F. 2..>...u
98A0:  03 80 CF 01 F6 C7 01 75  0A A8 01 74 06 80 CF 01   .......u ...t....
98B0:  E9 84 00 A8 02 74 03 E9  FE 01 F6 C7 04 75 0C A8   .....t.. .....u..
98C0:  04 74 08 80 CF 04 E8 06  03 EB D9 F6 C7 08 75 0A   .t...... ......u.
98D0:  A8 08 74 06 80 CF 08 E9  DF 02 8A 1E 06 00 80 CB   ..t..... ........
98E0:  C0 80 E3 FD F6 D3 22 C3  A8 01 74 1F 50 8B 46 08   ......". ..t.P.F.
98F0:  80 E4 07 3D FA 01 75 05  58 0C 80 EB 0E 8B 46 08   ...=..u. X.....F.
9900:  25 38 03 3D 00 01 58 75  02 34 01 9B DB E2 9B D9   %8.=..Xu .4......
9910:  6E 00 09 06 08 00 1F 5B  83 C4 1C 5D A9 FF BF 75   n......[ ...]...u
9920:  02 58 C3 50 53 8B DC 36  8B 47 04 36 89 47 06 5B   .X.PS..6 .G.6.G.[
9930:  58 83 C4 02 E9 FA 02 56  53 51 52 57 8B 5E 04 8B   X......V SQRW.^..
9940:  4E 02 F7 D3 8A CD 80 E1  38 D0 E9 D0 E9 D3 CB F6   N....... 8.......
9950:  C7 C0 74 52 8B 56 08 81  F2 E0 01 F6 C2 C0 75 20   ..tR.V.. ......u
9960:  F7 C2 20 01 75 40 F6 C2  10 75 08 F6 C2 08 75 16   .. .u@.. .u....u.
9970:  EB 34 90 80 FA 12 74 0E  80 FA 14 74 09 EB 27 90   .4....t. ...t..'.
9980:  F7 C2 10 01 75 20 80 E7  3F 8B 36 10 00 3B 36 12   ....u .. ?.6..;6.
9990:  00 75 03 E8 A8 FE 83 C6  0C 89 36 10 00 9B D9 F6   .u...... ..6.....
99A0:  9B DB 3C E9 05 01 F6 C3  03 74 03 EB 4A 90 8B 56   ..<..... .t..J..V
99B0:  08 81 F2 E0 01 F6 C2 C0  74 09 F7 C2 10 01 75 03   ........ t.....u.
99C0:  EB 35 90 0B DB 74 06 E8  C0 00 EB 2B 90 8B 36 10   .5...t.. ...+..6.
99D0:  00 3B 36 0E 00 75 03 E9  BE 00 80 CB 03 9B D9 F7   .;6..u.. ........
99E0:  9B DB 2C 8B 36 10 00 3B  36 0E 00 75 03 E8 5E FE   ..,.6..; 6..u..^.
99F0:  83 EE 0C 89 36 10 00 F6  C3 0C 75 50 8B F3 83 E6   ....6... ..uP....
9A00:  F0 0B F6 74 1A 9B DB 3E  4A 00 D1 EB D1 EB E8 79   ...t...> J......y
9A10:  00 9B DB 2E 4A 00 D1 E3  D1 E3 80 CB 03 EB 2D 8B   ....J... ......-.
9A20:  36 10 00 3B 36 0E 00 74  23 80 CB 0C 9B D9 F7 9B   6..;6..t #.......
9A30:  D9 F7 9B DB 2C 9B D9 F6  8B 36 10 00 3B 36 0E 00   ....,... .6..;6..
9A40:  75 03 E8 09 FE 83 EE 0C  89 36 10 00 8B 56 08 81   u....... .6...V..
9A50:  F2 E0 01 F6 C2 C0 75 0B  F7 C2 20 01 75 19 F6 C2   ......u. .. .u...
9A60:  10 75 03 EB 46 90 8A CA  80 E1 0F BA C4 50 D3 E2   .u..F... .....P..
9A70:  79 F1 F6 C3 0C 75 EC 83  E2 07 D0 E2 8B CA 8B D3   y....u.. ........
9A80:  D3 CA F6 C2 03 75 24 EB  0F 90 D1 CB D1 CB 9B D9   .....u$. ........
9A90:  F7 F7 C3 03 00 74 F3 C3  80 CC 04 C6 46 02 00 9B   .....t.. ....F...
9AA0:  D9 66 00 5F 5A 59 5B 5E  E9 67 FE 24 FE E8 1F 01   .f._ZY[^ .g.$....
9AB0:  5F 5A 59 5B 5E E9 EC FD  80 0E 08 00 02 51 8B 4E   _ZY[^... .....Q.N
9AC0:  08 80 E1 C0 80 F9 C0 74  6D 8B 4E 08 81 E1 38 03   .......t m.N...8.
9AD0:  83 F9 08 74 0D 83 F9 10  74 08 80 E1 30 83 F9 30   ...t.... t...0..0
9AE0:  75 54 F6 C7 C0 74 1D 80  E7 3F 8B 36 10 00 3B 36   uT...t.. .?.6..;6
9AF0:  12 00 75 03 E8 47 FD 83  C6 0C 89 36 10 00 9B D9   ..u..G.. ...6....
```

```
9B00:  F6 9B DB 3C 8B 4E 08 51  81 E1 00 04 81 C1 04 01   ...<.N.Q ........
9B10:  89 4E 08 E8 C1 00 E8 5E  00 59 83 E1 38 80 F9 08   .N.....^ .Y..8...
9B20:  74 08 80 F9 10 74 2E 80  F1 08 81 C9 C1 06 89 4E   t....t.. .......N
9B30:  08 E8 9B 00 EB 3B 8B 4E  08 81 E1 38 07 81 F9 28   .....;.N ...8...(
9B40:  03 74 0D 81 E1 38 01 81  F9 00 01 74 03 E8 7F 00   .t...8.. ...t....
9B50:  E8 24 00 EB 1C 80 CC 40  9B DB E2 9B D9 C9 9B D8   .$.....@ ........
9B60:  D1 9B D9 C9 9B DD D8 9B  DD 3E 16 00 9B 0A 06 16   ........ .>......
9B70:  00 59 24 FD E9 2D FD 9B  DB 7E 12 9B 8B 4E 1A F7   .Y$..-.. ....N..
9B80:  C1 FF 7F 74 21 F6 46 19  80 75 16 9B DF 6E 12 9B   ...t!.F. .u...n..
9B90:  DB 7E 12 9B 83 7E 1A 00  74 0C 81 E9 3E 40 01 4E   ........ t...>@.N
9BA0:  1A 9B DB 6E 12 C3 33 C9  89 4E 12 89 4E 14 89 4E   ...n..3. .N..N..N
9BB0:  16 89 4E 18 89 4E 1A EB  E8 50 8B 46 08 25 C0 01   ..N..N.. .P.F.%..
9BC0:  80 F4 01 3D C0 00 58 73  03 E8 03 00 E9 D5 FC F6   ...=..Xs ........
9BD0:  C4 40 75 5C 80 CC 40 1E  57 56 51 53 9B DB E2 8C   .@u\..@. WVQS....
9BE0:  D7 83 3E 14 00 00 74 04  8B 3E 56 00 8B 4E 08 8B   ..>...t. .>V..N..
9BF0:  D9 80 E5 07 80 CD D8 80  E3 C0 80 F3 C0 74 09 80   ........ .....t..
9C00:  E1 38 80 C9 04 C5 76 0A  86 E9 89 7E 14 8D 7E 16   .8....v. ........
9C10:  89 7E 12 C6 46 16 9B 89  4E 17 C6 46 19 CB FF 5E   ....F... N..F...^
9C20:  12 5B 59 5E 5F 1F 9B DD  3E 16 00 9B 0A 06 16 00   .[Y^_... >.......
9C30:  C3 1E 53 B3 8B F6 C4 04  75 38 B3 8A F6 C4 02 75   ..S..... u8.....u
9C40:  31 B3 88 A8 80 75 2B B3  89 F6 C4 01 75 24 B3 81   1....u+. ....u$..
9C50:  A8 01 75 1E B3 83 A8 04  75 18 B3 84 A8 08 75 12   ..u..... u.....u.
9C60:  B3 85 A8 10 75 0C B3 86  A8 20 75 06 B3 87 A8 40   ....u... . u....@
9C70:  75 00 2E 8E 1E 00 00 A1  00 00 0B 06 02 00 75 05   u....... ......u.
9C80:  93 B4 4C CD 21 93 5B FF  1E 00 00 1F 58 CF A3 06   ..L.!.[. ....X...
9C90:  00 25 3C FF 80 3E 04 00  00 74 08 A3 1A 00 9B D9   .%<..>.. .t......
9CA0:  2E 1A 00 A3 0A 00 C3 A1  06 00 C3 33 C0 3A 06 04   ........ ...3.:..
9CB0:  00 74 0B 9B DD 3E 16 00  9B A0 16 00 24 3F 0B 06   .t...>.. ....$?..
9CC0:  08 00 25 FF 1F A3 08 00  C3 25 00 0C 80 3E 04 00   ..%..... .%...>..
9CD0:  00 74 20 9B D9 3E 0A 00  9B 8B 0E 0A 00 80 E5 F3   .t ..>.. ........
9CE0:  0B C1 A3 1A 00 9B D9 2E  1A 00 9B D9 FC 9B D9 2E   ........ ........
9CF0:  0A 00 C3 8B 0E 0A 00 51  80 E5 F3 0A E5 88 26 0B   .......Q ......&.
9D00:  00 55 E8 EA 15 5D 8F 06  0A 00 E8 67 00 C3 25 00   .U...].. ...g..%.
9D10:  0C 80 3E 04 00 00 74 29  9B D9 3E 0A 00 9B 8B 0E   ..>...t) ..>.....
9D20:  0A 00 80 E5 F3 0B C1 A3  1A 00 9B D9 2E 1A 00 9B   ........ ........
9D30:  DB 1E 1A 00 9B D9 2E 0A  00 A1 1A 00 8B 16 1C 00   ........ ........
9D40:  C3 8B 0E 0A 00 51 80 E5  F3 0A E5 88 26 0B 00 55   .....Q.. ....&..U
9D50:  E8 64 14 5D 8B C2 8B D3  E8 19 00 8B 36 10 00 3B   .d.].... ....6..;
9D60:  36 0E 00 75 03 E8 E6 FA  83 EE 0C 89 36 10 00 8F   6..u.... ....6...
9D70:  06 0A 00 C3 8B 0E 16 00  09 0E 08 00 08 0E 0C 00   ........ ........
9D80:  F6 D1 8A 2E 06 00 80 CD  C2 80 E5 3F 0A CD F6 D1   ........ ...?....
9D90:  8A 2E 17 00 F7 C1 FF DF  74 D9 91 E9 93 FE FB 9B   ........ t.......
9DA0:  50 55 1E 56 8B EC C5 76  08 8A 04 80 0C C0 4E 4E   PU.V...v ......NN
9DB0:  89 76 08 D0 E8 D0 E8 D0  E8 F6 D0 24 18 0C 26 86   .v...... ...$..&.
9DC0:  C4 B0 9B 89 04 53 BB 01  00 EB 20 FB 9B 50 B8 3D   .....S.. .. ..P.=
9DD0:  A2 EB 06 FB 9B 50 B8 32  5C 55 1E 56 8B EC C5 76   .....P.2 \U.V...v
9DE0:  08 4E 4E 89 76 08 29 04  53 33 DB 54 58 3B C4 75   .NN.v.). S3.TX;.u
9DF0:  28 8B 40 01 25 FB 30 3D  D9 30 75 07 8A 40 02 3C   (.@.%.0= .0u..@.<
9E00:  F0 72 16 8B 40 01 25 FF  FE 3D DB E2 74 0B 8B 40   .r..@.%. .=..t..@
9E10:  01 3D DF E0 74 03 C6 04  90 5B 5E 1F 5D 58 CF 90   .=..t... .[^.]X..
9E20:  5C 0D 12 0D 40 0D B4 0D  5A 0D 14 0D 42 0D B4 0D   \...@... Z...B...
9E30:  52 0D 04 0D 32 0D B4 0D  50 0D 02 0D 30 0D B4 0D   R...2... P...0...
9E40:  64 0D 1A 0D 48 0D B4 0D  F0 0C 18 0D 46 0D B4 0D   d...H... ....F...
9E50:  60 0D F4 0C 22 0D B4 0D  EC 0C 16 0D 44 0D B4 0D   `..."... ....D...
```

```
9E60:  36 10 1C 10 F3 1F EE 1F  16 10 10 10 24 10 2E 10   6....... ....$...
9E70:  26 0F 09 10 30 0F 3A 0F  09 10 5B 0F 09 10 65 0F   &...0.:. ..[...e.
9E80:  6F 0F E7 0F FF 0F F0 0F  7B 0F C3 0F CF 0F DB 0F   o....... {.......
9E90:  A9 16 B5 1B 92 18 00 1B  64 17 0B 1C C0 19 68 1B   ........ d.....h.
9EA0:  90 1F 4A 1E 09 10 6D 1C  99 1F 4A 1F A0 1F C7 1C   ..J...m. ..J.....
9EB0:  F2 20 D9 20 DE 20 D4 20  E3 20 E8 20 ED 20 09 10   . . . .  . . . ..
9EC0:  43 25 6B 25 89 24 B5 24  09 10 09 10 09 10 09 10   C%k%.$.$ ........
9ED0:  B8 21 11 26 CE 22 09 10  4F 1D A7 1F 09 10 09 10   .!.&.".. O.......
9EE0:  18 20 62 20 54 20 68 20  6F 20 3F 20 54 20 68 20   . b T h  o ? T h
9EF0:  54 20 54 20 54 20 54 20  5B 20 5B 20 54 20 76 20   T T T T  [ [ T v
9F00:  62 20 3F 20 54 20 5B 20  EF 10 59 10 6D 10 5D 10   b ? T [  ..Y.m.].
9F10:  5D 10 59 10 6D 10 5D 10  6B 10 6B 10 D3 10 6B 10   ].Y.m.]. k.k...k.
9F20:  59 10 59 10 6D 10 C6 10  1F 12 74 10 6D 10 88 10   Y.Y.m... ..t.m...
9F30:  74 10 74 10 6D 10 92 10  6B 10 6B 10 D3 10 6B 10   t.t.m... k.k...k.
9F40:  88 10 92 10 6D 10 88 10  A0 13 74 10 6D 10 88 10   ....m... ..t.m...
9F50:  83 10 8D 10 64 10 83 10  6B 10 6B 10 D3 10 6B 10   ....d... k.k...k.
9F60:  74 10 74 10 6D 10 92 10  04 06 40 42 01 03 05 07   t.t.m... ..@B....
9F70:  C0 09 B2 00 08 00 B0 01  C0 00 01 04 00 B2 00 09   ........ ........
9F80:  00 B0 40 00 03 00 00 00  00 00 00 00 C0 00 40 80   ..@..... ......@.
9F90:  02 0F 00 B2 FF 09 00 B0  3F 00 00 00 00 80 7F FF   ........ ?.......
9FA0:  FF 7F 7F 00 00 00 00 00  00 F0 7F FF FF FF FF FF   ........ ........
9FB0:  FF EF 7F 00 00 00 00 00  00 00 80 01 C0 00 01 00   ........ ........
9FC0:  00 00 00 00 00 00 80 00  00 00 00 8A B1 6A F6 F4   ........ .....j..
9FD0:  A2 30 89 FE FF 00 00 9E  53 65 C2 42 D7 B3 DD 00   .0...... Se.B....
9FE0:  00 00 00 23 2C 9B 6B C1  91 0A 86 FF FF 00 00 84   ...#,.k. ........
9FF0:  64 DE F9 33 F3 04 B5 5F  00 B2 00 0B 00 B0 80 01   d..3..._ ........
A000:  00 00 00 35 C2 68 21 A2  DA 0F C9 01 00 00 00 FE   ...5.h!. ........
A010:  8A 1B CD 4B 78 9A D4 01  00 00 00 BC F0 17 5C 29   ...Kx... ......\)
A020:  3B AA B8 00 00 00 00 99  F7 CF FB 84 9A 20 9A FE   ;....... ..... ..
A030:  FF 00 00 AC 79 CF D1 F7  17 72 B1 FF FF 00 00 03   ....y... .r......
A040:  00 D4 7B 5A D8 3E 5C 69  8F 05 00 80 00 37 4D D7   ..{Z.>\i .....7M.
A050:  2C F8 D0 D4 D6 0C 00 00  00 D3 DC 17 66 EE BB BA   ,....... ....f...
A060:  82 12 00 80 00 CB 91 58  5E 8B 86 06 F5 14 00 00   .......X ^.......
A070:  00 03 00 E5 86 20 01 02  05 79 9C 09 00 80 00 63   ..... .. .y.....c
A080:  66 CF 88 70 B2 39 C9 0F  00 00 00 96 FA 46 C7 FE   f..p.9.. .....F..
A090:  0C B7 E4 13 00 80 00 CB  91 58 5E 8B 86 06 F5 14   ........ .X^.....
A0A0:  00 00 00 04 00 32 5B 08  CF C9 A4 50 A6 FD FF 00   .....2[. ...P....
A0B0:  00 CE D1 CA D5 4B A8 F0  D0 02 00 00 00 9F 89 2B   .....K.. .......+
A0C0:  E2 A8 52 4A 9C 05 00 00  00 65 42 50 55 CF E9 EF   ..RJ.... .eBPU...
A0D0:  90 06 00 00 00 90 4B AD  24 E6 E5 43 A4 05 00 00   ......K. $..C....
A0E0:  00 03 00 10 83 38 56 0A  4F 62 F0 03 00 00 00 E7   .....8V. Ob......
A0F0:  B4 1E 6D 90 51 50 EE 05  00 00 00 3B 24 6D 5B 20   ..m.QP.. ...;$m[
A100:  90 50 AC 06 00 00 00 90  4B AD 24 E6 E5 43 A4 05   .P...... K.$..C..
A110:  00 00 00 02 00 98 18 05  F4 FC 06 74 F2 05 00 00   ........ ...t....
A120:  00 08 AD E1 14 54 3D 9B  EC 0E 00 00 00 AF 5F A3   .....T=. ......_.
A130:  C3 4A D8 F0 FD 14 00 00  00 02 00 6F 77 7B 38 8B   .J...... ...ow{8.
A140:  10 A7 DA 0A 00 00 00 5D  E8 7B 9B 82 B1 03 A0 12   .......] .{......
A150:  00 00 00 7E 83 09 E7 14  F8 2D B7 16 00 00 00 03   ...~.... .-......
A160:  00 04 77 99 C2 E2 57 71  9B FE FF 00 00 9C 4F 31   ..w...Wq ......O1
A170:  F6 35 5E 91 DE 04 00 80  00 8A 4B EA 7A ED C9 D3   .5^..... ..K.z...
A180:  B2 08 00 00 00 C9 28 09  1D 2F E4 C4 8A 0A 00 80   ......(. ./......
A190:  00 02 00 BB 76 70 3E 5B  02 AC 8E 05 00 80 00 60   ....vp>[ .......`
A1A0:  EF 33 A9 D0 1F 04 9C 08  00 00 00 96 BB 83 6C E0   .3...... ......l.
A1B0:  F4 5F C0 09 00 80 00 71  0C 80 0C 76 0C 7C 0C 55   ._.....q ...v.|.U
```

```
A1C0:  1E 56 8B EC C5 76 06 4E  4E 89 76 06 C7 04 89 C0   .V...v.N N.v.....
A1D0:  5E 1F 5D CF 71 0C 7C 0C  76 0C 80 0C FB 50 06 1E   ^.].q.|. v....P..
A1E0:  57 56 52 51 53 83 EC 02  55 8B EC FC 8B D3 8B C7   WVRQS... U.......
A1F0:  C5 7E 14 47 47 8B 4D FE  8B D9 D0 C3 D0 C3 83 E3   .~.GG.M. ........
A200:  03 D1 C3 2E FF A7 3D 0C  8E 46 0E EB 0A 8C DB 8E   ......=. .F......
A210:  C3 EB 04 8C D3 8E C3 8C  46 02 EB 57 8B D3 8A D9   ........ F..W....
A220:  C0 EB 02 83 E3 06 47 8B  4D FE 2E FF A7 20 0C FC   ......G. M.... ..
A230:  50 06 1E 57 56 52 51 53  16 55 8B EC 8C DA 8B C7   P..WVRQS .U......
A240:  C5 7E 14 8B 0D 83 C7 02  80 C1 28 73 CF 8E C2 8B   .~...... ..(s....
A250:  D3 EB 20 FB 50 06 1E 57  56 52 51 53 16 55 8B EC   .. .P..W VRQS.U..
A260:  8C D8 8E C0 FC 8B D3 8B  C7 C5 7E 14 47 8B 4D FE   ........ ..~.G.M.
A270:  80 E9 34 D0 C5 D0 C5 8A  DD 83 E3 1F D1 E3 2E FF   ..4..... ........
A280:  A7 80 08 8B F2 EB 74 8B  F0 EB 70 8B 76 00 8E 46   ......t. ..p.v..F
A290:  02 8A 05 98 47 03 F0 EB  62 8B F0 03 76 00 8E 46   ....G... b...v..F
A2A0:  02 8A 05 98 47 03 F0 EB  52 8B C6 03 D0 8B C2 8B   ....G... R.......
A2B0:  F0 8A 05 98 47 03 F0 EB  42 8B 76 00 8E 46 02 03   ....G... B.v..F..
A2C0:  35 83 C7 02 EB 35 90 8B  F0 03 76 00 8E 46 02 03   5....5.. ..v..F..
A2D0:  35 83 C7 02 EB 25 90 8B  C6 03 D0 8B C2 8B F0 03   5....%.. ........
A2E0:  35 83 C7 02 EB 15 90 8B  F0 03 76 00 8E 46 02 EB   5....... ..v..F..
A2F0:  0A 8B F0 03 F2 EB 04 8B  35 47 47 89 7E 14 8A 1D   ........ 5GG.~...
A300:  2E 8E 1E 00 00 88 1E A6  00 C7 06 16 00 00 20 D0   ........ ...... .
A310:  ED D0 ED D0 ED D0 ED 8A  DD 83 E3 0E F6 C1 01 74   ........ .......t
A320:  0A B8 74 0E 50 2E FF A7  D0 08 90 53 8B D9 83 E3   ..t.P... ...S....
A330:  06 2E FF 97 F0 08 5B 8C  D8 8E C0 8B 36 10 00 8B   ......[. ....6...
A340:  FE 83 EF 0C 89 3E 96 00  EB 52 90 89 7E 14 8A 1D   .....>.. .R..~...
A350:  33 C0 2E 8B 3E 00 00 8E  DF 8E C7 88 1E A6 00 A3   3...>... ........
A360:  16 00 8A DD D0 EB D0 EB  D0 EB D0 EB 83 E3 0E F6   ........ ........
A370:  C1 01 74 09 2E FF 97 E0  08 E9 8F 00 90 E8 4C 00   ..t..... ......L.
A380:  72 40 89 36 96 00 F6 C1  04 74 04 89 3E 96 00 F6   r@.6.... .t..>...
A390:  C3 08 74 03 80 F3 02 F6  C1 02 74 1D 2E FF 97 C0   ..t..... ..t.....
A3A0:  08 8B 36 10 00 3B 36 0E  00 74 09 83 EE 0C 89 36   ..6..;6. .t.....6
A3B0:  10 00 EB 57 E8 8E F4 EB  F2 B8 74 0E 50 2E FF A7   ...W.... ..t.P...
A3C0:  C0 08 E8 80 F4 83 0E 16  00 01 EB 3F 8B 36 10 00   ........ ...?.6..
A3D0:  8B FE 8A D5 80 E2 1C 8A  F2 D0 E6 02 D6 32 F6 2B   ........ .....2.+
A3E0:  FA 3B 3E 0E 00 F8 7F 01  F5 C3 E8 B3 01 EB 1C 90   .;>..... ........
A3F0:  5D 83 C4 02 5B 59 5A 5E  5F 1F 07 E9 2A F8 5D 83   ]...[YZ^ _...*.].
A400:  C4 02 5B 59 5A 5E 5F 1F  07 58 CF A1 16 00 09 06   ..[YZ^_. .X......
A410:  08 00 08 06 0C 00 F6 D0  8A 3E 06 00 80 CF C2 80   ........ .>......
A420:  E7 3F 0A C7 F6 D0 A9 FF  DF 75 C5 FF 26 A7 00 80   .?...... .u..&...
A430:  3E A6 00 CD 75 C8 8B EC  C5 7E 14 83 C7 03 8B 4D   >...u... .~.....M
A440:  FE 80 E9 34 80 F9 07 77  B5 8B 46 0C 8B 56 04 8B   ...4...w ..F..V..
A450:  76 0A 8E 46 0E 8C 56 02  D0 C5 D0 C5 8A DD 83 E3   v..F..V. ........
A460:  1F D1 E3 2E FF A7 80 08  8A 0E A6 00 80 F9 9B 74   ........ .......t
A470:  14 80 F9 90 74 0F 80 F1  20 80 F9 F8 72 80 8B EC   ....t... ...r...
A480:  C5 7E 14 EB 10 8B EC C5  7E 14 47 8A 0D 80 F1 20   .~...... ~.G....
A490:  80 F9 F8 72 E7 8A 6D 01  83 C7 02 80 C1 08 8B 46   ...r..m. .......F
A4A0:  0C 8B 56 04 8B 76 0A 8E  46 0E 8C 56 02 D0 C5 D0   ..V..v.. F..V....
A4B0:  C5 8A DD 83 E3 1F D1 E3  2E FF A7 80 08 8B D9 83   ........ ........
A4C0:  E3 06 2E FF A7 F0 08 8B  D9 83 E3 06 2E FF A7 F8   ........ ........
A4D0:  08 8B D9 83 E3 06 2E FF  97 F8 08 8B 36 10 00 3B   ........ ....6..;
A4E0:  36 0E 00 76 08 83 EE 0C  89 36 10 00 C3 E8 55 F3   6..v.... .6....U.
A4F0:  EB F3 8B D9 83 E3 06 2E  FF A7 00 09 8B D9 83 E3   ........ ........
A500:  06 2E FF A7 08 09 F7 C1  06 00 75 03 E9 EA 11 E9   ........ ..u.....
A510:  A1 11 F7 C1 06 08 74 24  81 F1 03 02 F7 C1 03 06   ......t$ ........
```

```
A520:  75 11 81 F9 04 81 74 07  C7 06 0C 00 00 00 C3 54   u.....t. .......T
A530:  58 3B C4 75 6B A1 0C 00  89 46 12 C3 F7 C1 00 10   X;.uk... .F......
A540:  74 0C F7 C1 00 04 75 03  E9 09 11 E9 E8 10 F7 C1   t.....u. ........
A550:  00 04 75 03 E9 C7 0F E9  BB 0F 8A DD D0 EB 83 E3   ..u..... ........
A560:  0E 2E FF A7 10 09 8A DD  D0 EB 83 E3 0E 2E FF A7   ........ ........
A570:  20 09 8A DD D0 EB 83 E3  0E 2E FF A7 30 09 F7 C1    ....... ....0...
A580:  06 00 75 1C E9 50 11 80  F1 04 F7 C1 06 00 75 10   ..u..P.. ......u.
A590:  B8 01 00 E9 8A 11 F6 C1  06 74 05 33 C0 E9 80 11   ........ .t.3....
A5A0:  83 0E 16 00 40 C3 90 BA  00 80 EB 23 90 BA 80 00   ....@... ...#....
A5B0:  EB 1D 90 33 D2 BB 88 09  EB 18 90 33 D2 87 F7 BB   ...3.... ...3....
A5C0:  A8 09 EB 0E 90 33 D2 BB  A8 09 EB 06 90 33 D2 BB   .....3.. .....3..
A5D0:  68 09 8A 45 0B D0 E0 D0  E0 0A 44 0B 98 D1 E0 03   h..E.... ..D.....
A5E0:  D8 32 75 0A 32 54 0A 8B  4D 08 8B 44 08 2E FF 27   .2u.2T.. M..D...'
A5F0:  8B F7 8A D6 E8 51 00 88  55 0A C3 83 0E 16 00 04   .....Q.. U.......
A600:  EB 02 8B F7 83 0E 16 00  01 EB 3D BE D0 09 32 F2   ........ ..=...2.
A610:  80 E6 80 E8 1B 00 08 75  0A C3 83 0E 16 00 04 BE   .......u ........
A620:  DC 09 EB EA 83 0E 16 00  04 BE E8 09 83 0E 16 00   ........ ........
A630:  01 8B 3E 96 00 2E A5 2E  A5 2E A5 2E A5 2E A5 2E   ..>..... ........
A640:  A5 83 EF 0C 83 EE 0C C3  8B 3E 96 00 3B F7 74 0C   ........ .>..;.t.
A650:  A5 A5 A5 A5 A5 A5 83 EF  0C 83 EE 0C C3 F6 06 0B   ........ ........
A660:  00 10 74 C5 32 D6 78 C1  EB 86 8B C6 8B DF 83 C6   ..t.2.x. ........
A670:  06 83 C7 06 B9 04 00 FD  F3 A7 FC 72 04 8B F0 EB   ........ ...r....
A680:  83 8B F3 E9 7E FF 2B C1  7C 08 87 F7 86 F2 03 C8   ....~.+. |.......
A690:  F7 D8 F7 D8 3D 43 00 7E  2F 55 52 8B 75 08 BD 01   ....=C.~ /UR.u...
A6A0:  00 32 D6 79 02 F7 DD 8B  15 8B 4D 02 8B 5D 04 8B   .2.y.... ..M..]..
A6B0:  7D 06 0B ED 78 03 E9 60  04 83 EA 01 83 D9 00 83   }...x..` ........
A6C0:  DB 00 83 DF 00 E9 8B 03  55 52 51 32 D6 9C 8B E8   ........ URQ2....
A6D0:  AD 8B D0 AD 8B C8 AD 8B  D8 AD 33 F6 87 EE 0B F6   ........ ..3.....
A6E0:  74 70 83 FE 0E 7C 1A 0B  ED 74 03 83 CA 01 8B EA   tp...|.. .t......
A6F0:  8B D1 8B CB 8B D8 33 C0  83 EE 10 77 E5 74 53 72   ......3. ...w.tSr
A700:  29 83 FE 06 7C 33 95 0A  C0 74 03 80 CC 01 8A C4   )...|3.. .t......
A710:  8A E2 95 8A D6 8A F1 8A  CD 8A EB 8A DF 8A F8 8A   ........ ........
A720:  C4 32 E4 83 EE 08 77 11  74 28 D1 E5 D1 D2 D1 D1   .2....w. t(......
A730:  D1 D3 D1 D0 46 75 F3 EB  19 87 CE F7 C5 3F 00 74   ....Fu.. .....?.t
A740:  03 83 CD 20 D1 E8 D1 DB  D1 DE D1 DA D1 DD E2 F4   ... .... ........
A750:  8B CE 8B F7 8B F8 F7 C5  FF 3F 74 03 83 CD 01 9D   ........ .?t.....
A760:  58 78 22 03 14 13 4C 02  13 5C 04 13 7C 06 73 10   Xx"...L. .\..|.s.
A770:  D1 DF D1 DB D1 D9 D1 DA  D1 DD 73 03 83 CD 01 40   ........ ..s....@
A780:  8B F0 E9 94 03 2B 14 1B  4C 02 1B 5C 04 1B 7C 06   .....+.. L..\..|.
A790:  73 1A 33 F6 F7 D7 F7 D3  F7 D1 F7 D2 F7 DD F5 13   s.3..... ........
A7A0:  D6 13 CE 13 DE 13 FE 8B  F0 E9 A7 02 8B F0 58 80   ........ ......X.
A7B0:  F4 80 50 E9 9D 02 55 8A  FE 32 F2 52 03 C1 40 50   ..P...U. .2.R..@P
A7C0:  22 FA 33 DB 8B EB 8B CB  8B 04 0B C0 74 0C 8B 15   ".3..... ....t...
A7D0:  0B D2 74 06 F7 E2 8B E8  8B CA 55 33 ED 8B 04 0B   ..t..... ..U3....
A7E0:  C0 74 10 8B 55 02 0B D2  74 09 F7 E2 03 C8 13 DA   .t..U... t.......
A7F0:  83 D5 00 8B 44 02 0B C0  74 0F 8B 15 0B D2 74 09   ....D... t.....t.
A800:  F7 E2 03 C8 13 DA 83 D5  00 58 0B C1 50 33 C9 8B   ........ .X..P3..
A810:  04 0B C0 74 10 8B 55 04  0B D2 74 09 F7 E2 03 D8   ...t..U. ..t.....
A820:  13 EA 83 D1 00 8B 44 02  0B C0 74 10 8B 55 02 0B   ......D. ..t..U..
A830:  D2 74 09 F7 E2 03 D8 13  EA 83 D1 00 8B 44 04 0B   .t...... .....D..
A840:  C0 74 0F 8B 15 0B D2 74  09 F7 E2 03 D8 13 EA 83   .t.....t ........
A850:  D1 00 58 0B C3 50 33 DB  8B 04 0B C0 74 0A F7 65   ..X..P3. ....t..e
A860:  06 03 E8 13 CA 83 D3 00  8B 44 02 0B C0 74 10 8B   ........ .D...t..
A870:  55 04 0B D2 74 09 F7 E2  03 E8 13 CA 83 D3 00 8B   U...t... ........
```

```
A880:  44 04 0B C0 74 10 8B 55  02 0B D2 74 09 F7 E2 03   D...t..U ...t....
A890:  E8 13 CA 83 D3 00 8B 44  06 8B 15 0B D2 74 09 F7   .......D .....t..
A8A0:  E2 03 E8 13 CA 83 D3 00  8B D5 81 E5 FF 3F 58 0B   ........ .....?X.
A8B0:  C5 50 33 ED 52 8B 44 02  0B C0 74 0A F7 65 06 03   .P3.R.D. ..t..e..
A8C0:  C8 13 DA 83 D5 00 8B 44  04 0B C0 74 10 8B 55 04   .......D ...t..U.
A8D0:  0B D2 74 09 F7 E2 03 C8  13 DA 83 D5 00 8B 44 06   ..t..... ......D.
A8E0:  8B 55 02 0B D2 74 09 F7  E2 03 C8 13 DA 83 D5 00   .U...t.. ........
A8F0:  51 33 C9 8B 44 04 0B C0  74 0A F7 65 06 03 D8 13   Q3..D... t..e....
A900:  EA 83 D1 00 8B 44 06 8B  55 04 0B D2 74 09 F7 E2   .....D.. U...t...
A910:  03 D8 13 EA 83 D1 00 8B  44 06 F7 65 06 03 C5 13   ........ D..e....
A920:  D1 59 5D 8B FA 8B D1 8B  CB 8B D8 58 0B C0 74 03   .Y]..... ...X..t.
A930:  83 CD 01 5E E9 D0 01 F9  1B C1 32 F2 55 52 56 57   ...^.... ..2.URVW
A940:  83 C6 06 83 C7 06 B9 04  00 FD F3 A7 FC 5F 5E 9C   ........ ....._^.
A950:  8B E8 AD 8B C8 AD 8B D8  AD 8B D0 AD 92 8B F7 BF   ........ ........
A960:  98 00 A5 A5 A5 A5 33 FF  9D 72 0B D1 EA D1 D8 D1   ......3. .r......
A970:  DB D1 D9 D1 DF 45 55 89  3E 1A 00 E8 4A 00 57 C7   .....EU. >...J.W.
A980:  06 1A 00 00 00 E8 40 00  57 E8 3C 00 57 E8 38 00   ......@. W.<.W.8.
A990:  BD 01 80 D1 E1 D1 D3 D1  D0 D1 D2 72 22 BE 98 00   ........ ...r"...
A9A0:  3B 54 06 75 0C 3B 44 04  75 07 3B 5C 02 75 02 3B   ;T.u.;D. u.;\.u.;
A9B0:  0C 73 0C 0B C2 0B C1 0B  C3 0A C4 32 E4 8B E8 8B   .s...... ...2....
A9C0:  D7 59 5B 5F 5E E9 51 01  8B 36 9E 00 33 FF 3B D6   .Y[_^.Q. .6..3.;.
A9D0:  73 62 0B D2 75 04 3B F0  77 41 F7 F6 52 53 97 33   sb..u.;. wA..RS.3
A9E0:  ED 8B F5 A1 98 00 0B C0  74 04 F7 E7 8B F2 50 A1   ........ t.....P.
A9F0:  9A 00 0B C0 74 06 F7 E7  03 F0 13 EA A1 9C 00 0B   ....t... ........
AA00:  C0 74 08 F7 E7 03 E8 83  D2 00 92 8B 16 1A 00 5B   .t...... .......[
AA10:  2B D3 1B CE 5B 1B DD 5D  1B E8 95 92 91 93 73 13   +...[..] ......s.
AA20:  4F 03 0E 98 00 13 1E 9A  00 13 06 9C 00 13 16 9E   O....... ........
AA30:  00 73 ED C3 4F 2B 0E 98  00 1B 1E 9A 00 1B 06 9C   .s..O+.. ........
AA40:  00 03 0E 9A 00 13 1E 9C  00 13 C2 8B 16 98 00 F5   ........ ........
AA50:  EB C9 90 B0 04 0B FF 75  20 83 EE 10 FE C8 74 0C   .......u  .....t.
AA60:  8B FB 8B D9 8B CA 8B D5  33 ED EB E9 BE D0 09 8B   ........ 3.......
AA70:  3E 96 00 58 5D E9 BD FB  90 F7 C7 00 FF 75 1C 83   >..X]... .....u..
AA80:  EE 08 97 8A E0 8A C7 8A  FB 8A DD 8A E9 8A CE 8A   ........ ........
AA90:  F2 97 95 8A D4 8A E0 32  C0 95 90 F7 C7 00 80 75   .......2 .......u
AAA0:  78 4E D1 E5 D1 D2 D1 D1  D1 D3 D1 D7 F7 C7 00 80   xN...... ........
AAB0:  74 EF EB 65 0B D5 0B CA  0A CD 8A EB 0B C9 74 44   t..e.... ......tD
AAC0:  83 0E 16 00 20 D0 E8 72  1B D0 E8 72 0F 81 F9 00   .... ..r ...r....
AAD0:  80 77 1D 72 27 F6 C7 01  74 22 EB 14 58 50 D0 E4   .w.r'... t"..XP..
AAE0:  72 1A EB 0C D0 E8 72 14  58 50 D0 E4 72 02 EB 0C   r.....r. XP..r...
AAF0:  80 C7 01 83 D7 00 73 04  BF 00 80 46 33 ED 8B D5   ......s. ...F3...
AB00:  8B CA 8A D9 EB 4B 90 F7  C7 00 80 75 0C 4E D1 E5   .....K.. ...u.N..
AB10:  D1 D2 D1 D1 D1 D3 D1 D7  90 A0 0B 00 D0 E8 73 76   ........ ......sv
AB20:  D0 E8 0B ED 74 2B 83 0E  16 00 20 D0 E8 72 58 D0   ....t+.. .. ..rX.
AB30:  E8 72 4C 81 FD 00 80 77  07 72 16 F6 C2 01 74 11   .rL....w .r....t.
AB40:  33 ED 83 C2 01 13 CD 13  DD 13 FD 73 04 BF 00 80   3....... ...s....
AB50:  46 A1 96 00 97 89 15 89  4D 02 89 5D 04 89 45 06   F....... M..]..E.
AB60:  58 5D 80 E4 80 88 65 0A  81 FE 00 40 7D 0E 81 FE   X]....e. ...@}...
AB70:  01 C0 7E 54 89 75 08 C6  45 0B 00 C3 E9 7F 00 58   ..~T.u.. E......X
AB80:  50 D0 E4 72 CC EB B9 D0  E8 72 C6 58 50 D0 E4 72   P..r.... .r.XP..r
AB90:  AF EB BE E9 1E FF D0 E8  73 F9 95 0A C4 0A C2 8A   ........ s.......
ABA0:  E6 80 E4 07 80 E6 F8 95  0B ED 74 A5 83 0E 16 00   ........ ..t.....
ABB0:  20 D0 E8 72 25 D0 E8 72  19 81 FD 00 04 77 27 72    ..r%..r .....w'r
ABC0:  36 F6 C6 08 74 31 EB 1E  BE D0 09 E8 67 FA 88 65   6...t1.. ....g..e
ABD0:  0A C3 58 50 D0 E4 72 1F  EB 0C D0 E8 72 19 58 50   ..XP..r. ....r.XP
```

```
ABE0:  D0 E4 72 02 EB 11 33 ED  80 C6 08 13 CD 13 DD 13   ..r...3. ........
ABF0:  FD 73 04 BF 00 80 46 33  ED 32 D2 E9 53 FF 83 0E   .s....F3 .2..S...
AC00:  16 00 08 A0 0B 00 D0 E8  D0 E8 D0 E8 72 0E D0 E8   ........ ....r...
AC10:  72 22 BE DC 09 E8 1D FA  88 65 0A C3 D0 E8 72 0A   r"...... .e....r.
AC20:  83 0E 16 00 20 F6 C4 80  75 E8 BE F4 09 E8 05 FA   .... ... u.......
AC30:  88 65 0A C3 83 0E 16 00  20 F6 C4 80 74 D4 EB EA   .e......  ...t...
AC40:  26 AD 8B F8 26 AD 8A D0  D1 C0 24 01 D0 C8 86 C4   &...&... ..$.....
AC50:  8B 36 10 00 3B 36 12 00  75 03 E8 D8 EB 83 C6 0C   .6..;6.. u.......
AC60:  89 36 10 00 80 CA 80 32  F6 3C FF 74 21 3C 00 74   .6.....2 .<.t!<.t
AC70:  33 88 64 0A 2C 7F 98 89  44 08 88 74 0B 88 54 07   3.d.,... D..t..T.
AC80:  89 7C 05 33 C0 88 44 04  89 44 02 89 04 C3 88 64   .|.3..D. .D.....d
AC90:  0A B8 00 40 B6 02 80 FA  80 75 DC 0B FF 75 D8 80   ...@.... .u...u..
ACA0:  CE 01 EB D3 88 64 0A 80  FA 80 75 0C 0B FF 75 08   .....d.. ..u...u.
ACB0:  B8 01 C0 80 CE 01 EB BF  83 0E 16 00 02 2C 7F 98   ........ .....,..
ACC0:  40 48 D1 E7 D0 D2 0A D2  79 F7 EB AB F6 C1 02 75   @H...... y......u
ACD0:  07 33 C0 8B D8 E9 98 00  F6 C1 01 75 12 8B 5C 05   .3...... ...u..\.
ACE0:  8A 44 07 8A 64 0A D1 E0  B4 FF D1 D8 E9 81 00 8A   .D..d... ........
ACF0:  64 0A E9 A6 00 E9 8E 00  E9 D8 00 8B FE 8B 36 10   d....... ......6.
AD00:  00 8B 44 0A 8A 4C 0B 0A  C9 75 C1 8A 4C 0A 8B 44   ..D..L.. .u..L..D
AD10:  08 3D 80 00 7D DF 3D 81  FF 7E DD 04 7F 8A 64 07   .=..}.=. .~....d.
AD20:  86 E0 D0 E0 D0 E1 D1 D8  8B 14 0B 54 02 0A D6 32   ........ ...T...2
AD30:  F6 8B 5C 05 0B 54 03 74  37 83 0E 16 00 20 8A 0E   ..\..T.t 7.... ..
AD40:  0B 00 D0 E9 D0 E9 D0 E9  72 2C D0 E9 72 32 81 FA   ........ r,..r2..
AD50:  00 80 72 1C 77 05 F6 C3  01 74 15 8A D0 83 C3 01   ..r.w... .t......
AD60:  15 00 00 32 D0 79 09 8B  D0 D1 E2 80 FE FF 74 16   ...2.y.. ......t.
AD70:  93 AB 8B C3 AB C3 D0 E9  72 F6 0A E4 78 DD EB F0   ........ r...x...
AD80:  0A E4 78 EC EB D5 83 0E  16 00 28 8A 0E 0B 00 D0   ..x..... ..(.....
AD90:  E9 D0 E9 D0 E9 72 18 D0  E9 72 31 2E 8B 1E 02 0A   .....r.. .r1.....
ADA0:  80 E4 80 0A FC 2E A1 00  0A AB 8B C3 AB EB C6 D0   ........ ........
ADB0:  E9 72 05 F6 C4 80 75 E3  2E 8B 1E 06 0A 80 E4 80   .r....u. ........
ADC0:  0A E7 8A C3 AB 2E A1 04  0A AB EB A9 F6 C4 80 74   ........ .......t
ADD0:  CA EB E5 83 0E 16 00 30  F7 D8 05 82 FF 3D 18 00   .......0 .....=..
ADE0:  7D 37 91 8B 14 0B 54 02  8A C2 0A C6 8B 54 04 8B   }7....T. .....T..
ADF0:  5C 06 0A C0 74 03 80 CA  01 D1 EB D1 DA 73 03 80   \...t... .....s..
AE00:  CA 01 E2 F5 86 E5 8A 64  0A 80 E4 80 8A C7 8A FB   .......d ........
AE10:  8A DE 8A F2 32 D2 E9 25  FF 33 C0 8B D8 E9 50 FF   ....2..% .3....P.
AE20:  87 FE E8 10 EA 87 FE EB  0A 8B 3E 10 00 3B 3E 12   ........ ..>..;>.
AE30:  00 73 ED 83 C7 0C 89 3E  10 00 26 AD 8B E8 26 AD   .s.....> ..&...&.
AE40:  8B D0 26 AD 8B C8 26 AD  8B F7 8B D8 D1 E5 D1 D2   ..&...&. ........
AE50:  D1 D1 D1 D3 D1 E5 D1 D2  D1 D1 D1 D3 D1 E5 D1 D2   ........ ........
AE60:  D1 D1 D1 D3 80 CB 80 88  5C 07 89 4C 05 89 54 03   ........ \..L..T.
AE70:  89 6C 01 0B CD 0B CA 8A  F4 80 E6 80 88 74 0A 32   .l...... .....t.2
AE80:  F6 88 34 80 E4 7F D1 E8  D1 E8 D1 E8 D1 E8 3D FF   ..4..... ......=.
AE90:  07 74 0F 3D 00 00 74 1D  2D FF 03 89 44 08 88 74   .t.=..t. -...D..t
AEA0:  0B C3 B8 00 40 B6 02 80  FB 80 75 EF 0B C9 75 EB   ....@... ..u...u.
AEB0:  80 CE 01 EB E6 80 FB 80  75 0B 0B C9 75 07 B8 01   ........ u...u...
AEC0:  C0 B6 01 EB D6 83 0E 16  00 02 2D FF 03 8B 2C 8B   ........ ..-...,.
AED0:  54 02 8B 4C 04 8B 5C 06  40 48 D1 E5 D1 D2 D1 D1   T..L..\. @H......
AEE0:  D1 D3 0B DB 79 F3 89 2C  89 54 02 89 4C 04 89 5C   ....y.., .T..L..\
AEF0:  06 32 F6 EB A6 F6 C1 02  75 09 33 C0 AB AB AB AB   .2...... u.3.....
AF00:  E9 1A 01 F6 C1 01 75 3D  8B 54 01 8B 5C 03 8B 44   ......u= .T..\..D
AF10:  05 8A 4C 07 D0 E9 D1 D8  D1 DB D1 DA D0 E9 D1 D8   ..L..... ........
AF20:  D1 DB D1 DA D0 E9 D1 D8  D1 DB D1 DA 92 AB 8B C3   ........ ........
AF30:  AB 8B C2 AB 8A 7C 0A 80  E7 80 B8 F0 7F 0A E7 0A   .....|.. ........
```

```
AF40:  C1 AB E9 D8 00 8A 5C 0A  80 E3 80 E9 EE 00 E9 D0   ......\. ........
AF50:  00 E9 0B 01 EB 9F 90 8B  FE 8B 36 10 00 8A 4C 0B   ........ ..6...L.
AF60:  0A C9 75 F0 8A 4C 0A 8B  6C 08 81 FD 00 04 7D DE   ..u..L.. l.....}.
AF70:  81 FD 01 FC 7E DB 8A 04  8B 54 01 0A C0 74 03 80   ....~... .T...t..
AF80:  CA 01 F6 C2 07 74 52 83  0E 16 00 20 A0 0B 00 D0   .....tR. ... ....
AF90:  E8 D0 E8 D0 E8 72 3A D0  E8 72 30 F6 C2 04 74 39   .....r:. .r0...t9
AFA0:  F6 C2 0B 74 34 8B 5C 03  8B 44 05 8A 4C 07 80 E1   ...t4.\. .D..L...
AFB0:  7F 83 C2 08 83 D3 00 15  00 00 80 D1 00 79 26 80   ........ .....y&.
AFC0:  E1 7F 45 81 FD 00 04 7C  1C EB 53 D0 E1 73 D6 EB   ..E....| ..S..s..
AFD0:  08 D0 E8 72 04 D0 E1 72  CC 8B 5C 03 8B 44 05 8A   ...r...r ..\..D..
AFE0:  4C 07 80 E1 7F D0 E9 D1  D8 D1 DB D1 DA D0 E9 D1   L....... ........
AFF0:  D8 D1 DB D1 DA D0 E9 D1  D8 D1 DB D1 DA 92 AB 8B   ........ ........
B000:  C3 AB 8B C2 AB 8B C5 05  FF 03 D1 E0 D1 E0 D1 E0   ........ ........
B010:  D1 E0 0A C1 8A 4C 0A 80  E1 80 0A E1 AB C3 83 EF   .....L.. ........
B020:  06 83 0E 16 00 28 8A 5C  0A 80 E3 80 8A 0E 0B 00   .....(.\ ........
B030:  D0 E9 D0 E9 D0 E9 72 14  D0 E9 72 1D BE 08 0A 2E   ......r. ..r.....
B040:  A5 2E A5 2E A5 2E AD 0A  E3 AB EB D1 D0 E9 72 04   ........ ......r.
B050:  0A DB 75 E8 BE 10 0A EB  E6 0A DB 74 DF EB F5 83   ..u..... ...t....
B060:  0E 16 00 30 81 C5 FF 03  F7 DD 8B CD 83 C1 04 8A   ...0.... ........
B070:  74 0A 80 E6 80 8A 54 07  8B 5C 05 8B 6C 03 8B 44   t.....T. .\..l..D
B080:  01 D0 EA D1 DB D1 DD D1  D8 E2 F6 AB 8B C5 AB 8B   ........ ........
B090:  C3 AB 8B C2 AB EB 86 26  AD 8B F8 0B FF 74 31 33   .......& .....t13
B0A0:  ED 8B DD 8B D3 B8 0F 00  8B 36 10 00 3B 36 12 00   ........ .6..;6..
B0B0:  75 03 E8 80 E7 83 C6 0C  89 36 10 00 32 C9 88 4C   u....... .6..2..L
B0C0:  0B 8B CF 80 E5 80 79 02  F7 DF 88 6C 0A E9 59 02   ......y. ...l..Y.
B0D0:  8B 36 10 00 3B 36 12 00  75 03 E8 58 E7 83 C6 0C   .6..;6.. u..X....
B0E0:  89 36 10 00 33 C0 89 04  89 44 02 89 44 04 89 44   .6..3... .D..D..D
B0F0:  06 C7 44 08 01 C0 88 64  0A B4 01 88 64 0B C3 56   ..D....d ....d..V
B100:  8B 36 10 00 F6 44 0B 02  75 38 F6 44 0B 01 75 2E   .6...D.. u8.D..u.
B110:  8B 4C 08 83 F9 0F 7F 2A  8B 6C 04 8B 7C 06 8B 14   .L.....* .l..|...
B120:  8B 5C 02 E8 2A 02 0B DB  75 18 8A 64 0A 0A E4 79   .\..*... u..d...y
B130:  04 F7 DA 74 04 33 C2 78  09 5F 8B C2 AB C3 33 D2   ...t.3.x ._....3.
B140:  EB F7 83 0E 16 00 01 BA  00 80 EB ED 26 AD 8B E8   ........ ....&...
B150:  26 AD 8B F8 0B C5 74 3D  33 DB 8B D3 B8 1F 00 8B   &.....t= 3.......
B160:  36 10 00 3B 36 12 00 75  03 E8 C9 E6 83 C6 0C 89   6..;6..u ........
B170:  36 10 00 32 C9 88 4C 0B  8B CF 80 E5 80 79 0C 83   6..2..L. .....y..
B180:  F7 FF 83 F5 FF 83 C5 01  83 D7 00 88 6C 0A 0B FF   ........ ....l...
B190:  74 06 E9 94 01 E9 38 FF  8B FD 33 ED 2D 10 00 E9   t.....8. ..3.-...
B1A0:  87 01 56 E8 08 00 5F 8B  C2 AB 8B C3 AB C3 8B 36   ..V..._. .......6
B1B0:  10 00 F6 44 0B 02 75 41  F6 44 0B 01 75 32 8B 4C   ...D..uA .D..u2.L
B1C0:  08 83 F9 1F 7F 33 8B 6C  04 8B 7C 06 8B 14 8B 5C   .....3.l ..|....\
B1D0:  02 E8 7C 01 0B ED 75 21  8A 64 0A 0A E4 79 0C 83   ..|...u! .d...y..
B1E0:  F3 FF 83 F2 FF 83 C2 01  83 D3 00 33 C3 78 06 C3   ........ ...3.x..
B1F0:  33 D2 8B DA C3 0B DA 74  F6 83 0E 16 00 01 BB 00   3......t ........
B200:  80 33 D2 C3 26 AD 8B D0  26 AD 8B D8 26 AD 8B E8   .3..&... &...&...
B210:  26 AD 8B F8 0B C5 0B C3  0B C2 74 3F B8 3F 00 8B   &....... ..t?.?..
B220:  36 10 00 3B 36 12 00 75  03 E8 09 E6 83 C6 0C 89   6..;6..u ........
B230:  36 10 00 32 C9 88 4C 0B  8B CF 80 E5 80 79 03 E8   6..2..L. .....y..
B240:  91 00 88 6C 0A 0B FF 75  0F 0B ED 75 0B 8B FB 8B   ...l...u ...u....
B250:  EA 33 DB 33 D2 2D 20 00  E9 CE 00 E9 72 FE 56 E8   .3.3.- . ....r.V.
B260:  0E 00 97 92 5F AB 8B C3  AB 8B C5 AB 8B C2 AB C3   ...._... ........
B270:  8B 36 10 00 F6 44 0B 02  75 4F F6 44 0B 01 75 35   .6...D.. uO.D..u5
B280:  8B 4C 08 83 F9 3F 7F 41  8B 6C 04 8B 7C 06 8B 14   .L...?.A .l..|...
B290:  8B 5C 02 E8 BA 00 8A 64  0A 0A E4 79 03 E8 33 00   .\.....d ...y..3.
```

```
B2A0:  33 C7 78 1B 3B 36 0E 00  75 03 E8 98 E5 83 EE 0C   3.x.;6.. u.......
B2B0:  89 36 10 00 C3 33 FF 33  ED 8B DD 8B D5 EB E5 0B   .6...3.3 ........
B2C0:  FD 0B FB 0B FA 75 02 EB  DB 83 0E 16 00 01 BF 00   .....u.. ........
B2D0:  80 EB E4 F7 D7 F7 D5 F7  D3 F7 DA F5 83 D3 00 83   ........ ........
B2E0:  D5 00 83 D7 00 C3 8B 36  10 00 8B 4C 08 83 F9 3F   .......6 ...L...?
B2F0:  7D 20 8B 6C 04 8B 7C 06  8B 14 8B 5C 02 E8 50 00   } .l..|. ...\..P.
B300:  33 C0 0B C7 0B C5 0B C3  0B C2 74 07 B8 3F 00 E8   3....... ..t..?..
B310:  17 00 C3 C7 44 08 01 C0  89 04 89 44 02 89 44 04   ....D... ...D..D.
B320:  89 44 06 C6 44 0B 01 EB  E9 33 C9 D1 E2 D1 D3 D1   .D..D... .3......
B330:  D5 D1 D7 72 02 E2 F4 D1  DF D1 DD D1 DB D1 DA 03   ...r.... ........
B340:  C1 89 44 08 89 14 89 5C  02 89 6C 04 89 7C 06 C3   ..D....\ ..l..|..
B350:  33 C0 83 E9 3F F7 D9 49  7C 61 74 2B 83 F9 40 7D   3...?..I |at+..@}
B360:  5B 83 F9 30 7E 13 0B D3  0B D5 74 02 0C 01 8B D7   [..0~... ..t.....
B370:  33 FF 8B EF 8B DF 83 E9  30 D1 EF D1 DD D1 DB D1   3....... 0.......
B380:  DA 73 02 D0 D0 E2 F2 D1  EF D1 DD D1 DB D1 DA D0   .s...... ........
B390:  D4 0B C0 74 26 83 0E 16  00 20 F6 06 0B 00 04 75   ...t&... . .....u
B3A0:  29 F6 06 0B 00 08 75 31  0A C2 22 E0 D0 EC 73 0B   ).....u1 .."...s.
B3B0:  33 C0 83 C2 01 13 D8 13  E8 13 F8 C3 B0 01 32 E4   3....... ......2.
B3C0:  33 FF 8B EF 8B DF 8B D7  EB C7 F6 06 0B 00 08 75   3....... .......u
B3D0:  EA F6 44 0A 80 75 D9 EB  E2 F6 44 0A 80 75 DC EB   ..D..u.. ..D..u..
B3E0:  CF 8B FE 8B 36 10 00 3B  36 12 00 75 03 E8 45 E4   ....6..; 6..u..E.
B3F0:  83 C6 0C 89 36 10 00 87  FE 8C C0 8C DA 8E C2 8E   ....6... ........
B400:  D8 A5 A5 A5 A5 8C C0 8C  DA 8E C2 8E D8 26 AD 83   ........ .....&..
B410:  EF 08 87 F7 8A F4 80 E6  80 88 74 0A 80 E4 7F 32   ........ ..t....2
B420:  F6 3D FF 7F 74 0F 3D 00  00 74 25 2D FF 3F 89 44   .=..t.=. .t%-.?.D
B430:  08 88 74 0B C3 B8 00 40  B6 02 81 7C 06 00 80 75   ..t....@ ...|...u
B440:  ED 8B 6C 04 0B 6C 02 0B  2C 75 E3 80 CE 01 EB DE   ..l..l.. ,u......
B450:  8B 6C 06 0B 6C 04 0B 6C  02 0B 2C 75 07 B8 01 C0   .l..l..l ..,u....
B460:  B6 01 EB CA 83 0E 16 00  30 33 ED 89 2C 89 6C 02   ........ 03..,.l.
B470:  89 6C 04 89 6C 06 EB E5  F6 C7 01 75 1F A5 A5 A5   .l..l... ...u....
B480:  A5 B8 FF 7F 0A E6 AB 8B  36 10 00 3B 36 0E 00 75   ........ 6..;6..u
B490:  03 E8 B1 E3 83 EE 0C 89  36 10 00 C3 33 C0 AB AB   ........ 6...3...
B4A0:  AB B8 00 80 AB B8 FF 7F  0A E6 AB 8B 36 10 00 3B   ........ ....6..;
B4B0:  36 0E 00 75 03 E8 8D E3  83 EE 0C 89 36 10 00 C3   6..u.... ....6...
B4C0:  F6 C7 02 75 B3 33 C0 AB  AB AB AB AB 8B 36 10 00   ...u.3.. .....6..
B4D0:  3B 36 0E 00 75 03 E8 6C  E3 83 EE 0C 89 36 10 00   ;6..u..l .....6..
B4E0:  C3 8B FE 8B 36 10 00 8B  44 08 05 FF 3F 8A 74 0A   ....6... D...?.t.
B4F0:  80 E6 80 0A E6 8A 7C 0B  0A FF 75 C4 A5 A5 A5 A5   ......|. ..u.....
B500:  AB 83 EE 08 3B 36 0E 00  75 03 E8 38 E3 83 EE 0C   ....;6.. u..8....
B510:  89 36 10 00 C3 8B 36 10  00 80 64 0A 7F C3 8B 36   .6....6. ..d....6
B520:  10 00 80 74 0A 80 C3 26  AD A3 0A 00 A3 06 00 C3   ...t...& ........
B530:  A1 06 00 8B FE AB C3 A1  0C 00 8B FE AB C3 8B 36   ........ .......6
B540:  10 00 8B FE 83 EF 0C B1  0F 8A 45 08 24 0F 2A C8   ........ ..E.$.*.
B550:  8B 45 06 D3 E8 8A 4D 0A  0A C9 79 02 F7 D8 03 44   .E....M. ..y....D
B560:  08 70 0E 3D 00 40 7D 0B  3D 01 C0 7E 0F 89 44 08   .p.=.@}. =..~..D.
B570:  C3 79 09 B8 00 40 C6 44  0B 03 EB F1 B8 01 C0 C6   .y...@.D ........
B580:  44 0B 01 EB E8 BA 01 00  EB 02 33 D2 F7 06 16 00   D....... ..3.....
B590:  00 20 74 02 87 F7 8A 44  0A 8A 65 0A 33 DB 8A 5C   . t....D ..e.3..\
B5A0:  0B D0 E3 D0 E3 0A 5D 0B  D0 E3 2E FF A7 40 09 32   ......]. .....@.2
B5B0:  E0 78 46 0A C0 79 04 87  F7 86 DF 8B 44 08 3B 45   .xF..y.. ....D.;E
B5C0:  08 7C 1A 7F 1F B9 04 00  83 C6 06 83 C7 06 FD F3   .|...... ........
B5D0:  A7 FC 72 09 77 0E C6 06  0D 00 40 EB 40 C6 06 0D   ..r.w... ..@.@...
B5E0:  00 01 EB 39 C6 06 0D 00  00 EB 32 C6 06 0D 00 41   ...9.... ..2....A
B5F0:  EB 2B F6 06 0B 00 10 74  F2 24 80 78 E0 EB E5 F6   .+.....t .$.x....
```

SAMPLE.DMP Thursday, January 6, 1994 12:01pm Page 55

```
B600:  06 0B 00 10 74 E5 80 E4  80 78 D9 EB D0 F6 06 0B   ....t... .x......
B610:  00 10 74 D7 32 E0 80 E4  80 74 BB EB DC 0B D2 74   ..t.2... .t.....t
B620:  14 8B 36 10 00 3B 36 0E  00 75 03 E8 17 E2 83 EE   ..6..;6. .u......
B630:  0C 89 36 10 00 C3 8B 36  10 00 B0 41 3B 36 0E 00   ..6....6 ...A;6..
B640:  74 0E 8B 44 0A 86 C4 D1  C0 24 07 BB C8 09 2E D7   t..D.... .$......
B650:  A2 0D 00 C3 8B 36 10 00  8A 44 0A 24 80 33 DB 8B   .....6.. .D.$.3..
B660:  D3 8A 5C 0B D1 E3 2E FF  A7 60 09 BB 6C 0A EB 1C   ..\..... .`..l...
B670:  BB 78 0A EB 17 BB 84 0A  EB 12 BB 90 0A EB 0D BB   .x...... ........
B680:  9C 0A EB 08 BB 18 0A EB  03 BB 24 0A 8B 36 10 00   ........ ..$..6..
B690:  3B 36 12 00 75 03 E8 9C  E1 83 C6 0C 89 36 10 00   ;6..u... .....6..
B6A0:  8B F3 8B 3E 10 00 2E A5  2E A5 2E A5 2E A5 2E A5   ...>.... ........
B6B0:  2E A5 C3 E8 16 ED 73 04  5A E9 06 ED 8B F7 83 C6   ......s. Z.......
B6C0:  0C 3B 36 10 00 7F 08 E8  86 EF 83 C7 0C EB EF 83   .;6..... ........
B6D0:  EF 0C 89 3E 10 00 C3 F7  C1 00 1C 74 1B 8C D8 8E   ...>.... ...t....
B6E0:  C0 E8 E8 EC 73 04 5A E9  D8 EC B9 06 00 8B 04 8B   ....s.Z. ........
B6F0:  1D AB 89 1C 46 46 E2 F5  C3 E8 D0 EC 73 04 5A E9   ....FF.. ....s.Z.
B700:  C0 EC 8B 36 10 00 3B 36  12 00 75 03 E8 26 E1 83   ...6..;6 ..u..&..
B710:  C6 0C 89 36 10 00 8C D8  8E C0 87 F7 E8 31 EF C3   ...6.... .....1..
B720:  F7 C1 C0 01 74 10 E8 A3  EC 73 04 5A E9 93 EC 8C   ....t... .s.Z....
B730:  DA 8E C2 E8 1A EF 0B C0  74 14 8B 36 10 00 3B 36   ........ t..6..;6
B740:  0E 00 75 03 E8 FE E0 83  EE 0C 89 36 10 00 C3 55   ..u..... ...6...U
B750:  8B 3E 10 00 89 3E 96 00  33 ED C7 06 A2 00 00 00   .>...>.. 3.......
B760:  8B F7 83 EE 0C 8B 45 08  2B 44 08 A3 A0 00 8B 15   ......E. +D......
B770:  8B 4D 02 8B 5D 04 8B 45  06 7D 06 8B 75 08 EB 42   .M..]..E .}..u..B
B780:  90 3B 44 06 72 25 77 12  3B 5C 04 72 1E 77 0B 3B   .;D.r%w. ;\.r.w.;
B790:  4C 02 72 17 77 04 3B 14  72 11 E8 BB 00 83 3E A0   L.r.w.;. r.....>.
B7A0:  00 00 74 1B E8 87 00 75  D8 EB 14 83 3E A0 00 00   ..t....u ....>...
B7B0:  74 0D E8 8B 00 E8 A0 00  E8 73 00 75 C4 EB 00 8B   t....... .s.u....
B7C0:  74 08 8B 7D 0A 97 8A E0  50 8B C5 83 E5 FC 0B 2E   t..}.... P.......
B7D0:  A2 00 8A 26 0D 00 80 E4  FB A8 01 75 05 80 E4 FD   ...&.... ...u....
B7E0:  EB 03 80 CC 02 A8 02 75  09 0B ED 74 21 80 E4 BF   .......u ...t!...
B7F0:  EB 03 80 CC 40 A8 04 75  09 0B ED 74 20 80 E4 FE   ....@..u ...t ...
B800:  EB 03 80 CC 01 88 26 0D  00 33 ED E9 45 F2 A0 0D   ......&. .3..E...
B810:  00 A8 02 75 05 80 E4 BF  EB 03 80 CC 40 A0 0D 00   ...u.... ....@...
B820:  A8 40 75 05 80 E4 FE EB  DC 80 CC 01 EB D7 F6 C4   .@u..... ........
B830:  80 75 0C 83 3E A0 00 00  74 05 E8 03 00 EB EF C3   .u..>... t.......
B840:  D1 E2 D1 D1 D1 D3 D1 D0  FF 0E A0 00 D1 E5 72 01   ........ ......r.
B850:  C3 C7 06 A2 00 01 00 C3  2B 14 1B 4C 02 1B 5C 04   ........ +..L..\.
B860:  1B 44 06 45 C3 8B 36 10  00 E8 2C 00 C3 D0 DC 73   .D.E..6. ..,....s
B870:  20 D0 D0 72 12 A0 0B 00  A8 10 75 1B EB 09 F6 C4    ..r.... ..u.....
B880:  02 75 EA D0 DC 72 10 8B  FE BE E8 09 E8 A6 ED 8B   .u...r.. ........
B890:  F7 81 0E 16 00 81 00 C3  8B 44 0A A9 80 03 75 DE   ........ .D....u.
B8A0:  56 BF 4A 00 C7 45 0A 00  00 8B 44 08 48 8B 5C 06   V.J..E.. ..D.H.\.
B8B0:  8B 4C 04 8B 54 02 A8 01  74 07 40 D1 EB D1 D9 D1   .L..T... t.@.....
B8C0:  DA D1 F8 89 45 08 83 FB  FE 72 03 F9 EB 39 52 B8   ....E... .r...9R.
B8D0:  75 B0 F7 E3 BD D8 57 03  EA 73 03 BD FF FF 8B D3   u.....W. .s......
B8E0:  33 C0 F7 F5 03 E8 D1 DD  8B D3 8B C1 F7 F5 F9 13   3....... ........
B8F0:  E8 D1 DD 8B D3 8B C1 F7  F5 8B F0 58 F7 F5 8B DD   ........ ...X....
B900:  8B C8 83 C1 01 13 DE D1  DB D1 D9 89 5D 06 89 4D   ........ ....]..M
B910:  04 C7 45 02 00 00 C7 05  00 00 8B F7 5F 89 3E 96   ..E..... ...._.>.
B920:  00 E8 97 EC BE 4A 00 E8  A3 EC FF 4D 08 8B F7 C3   .....J.. ...M....
B930:  57 BF 8A 00 2E A5 2E A5  2E A5 2E A5 2E A5 2E A5   W....... ........
B940:  BE 8A 00 5F C3 3A ED EB  56 8C C9 8E D9 8B 4C 0A   ..._.:.. V.....L.
B950:  80 E1 80 26 8B 55 0A 80  E2 80 3A D1 75 45 06 56   ...&.U.. ..:.uE.V
```

SAMPLE.DMP Thursday, January 6, 1994 12:01pm Page 56

```
B960:  57 0A C9 79 08 1E 06 1F  07 87 F7 87 CA 80 E5 01   W..y.... ........
B970:  80 E6 01 3A F5 75 28 0A  ED 77 CA 8B 4C 08 81 C1   ...:.u(. .w..L...
B980:  FF 3F 26 8B 55 08 81 C2  FF 3F 3B CA 75 11 83 C6   .?&.U... .?;.u...
B990:  06 83 C7 06 FD A7 75 07  A7 75 04 A7 75 01 A7 FC   ......u. .u..u...
B9A0:  5F 5E 07 8C C1 8E D9 C3  BF 7E 00 E8 A2 EC 57 56   _^...... .^....WV
B9B0:  53 BF 72 00 E8 99 EC 89  3E 96 00 E8 F5 EB 5E 2E   S.r..... >.....^.
B9C0:  AD 91 5F E8 6F EC 89 3E  96 00 51 56 BE 72 00 E8   .._.o..> ..QV.r..
B9D0:  E1 EB 5E 83 C6 0C 56 E8  56 FF E8 F0 EB 5E 59 E2   ..^...V. V....^Y.
B9E0:  E9 8B DE 5E 56 53 E8 CA  EB 5E 83 C6 0C 2E AD 91   ...^VS.. .^......
B9F0:  5B 57 8B FB E8 3E EC 51  56 BE 72 00 89 3E 96 00   [W...>.Q V.r..>..
BA00:  E8 CA EB 5E 59 51 83 C6  0C 56 BE 72 00 E8 A3 EB   ...^YQ.. .V.r....
BA10:  5E 56 E8 1B FF E8 B5 EB  5E 59 E2 E9 8B F7 5F C3   ^V...... ^Y...._.
BA20:  8B 36 10 00 E8 1E 00 56  8B 36 10 00 3B 36 12 00   .6.....V .6..;6..
BA30:  75 03 E8 00 DE 83 C6 0C  89 36 10 00 8B 3E 10 00   u....... .6...>..
BA40:  5E E8 0C EC C3 BB A8 0A  E8 5D FF C3 8B 3E 10 00   ^....... .]...>..
BA50:  8B F7 8B 44 0A 83 EF 0C  E8 19 00 8B 36 10 00 8B   ...D.... ....6...
BA60:  36 10 00 3B 36 0E 00 75  03 E8 D9 DD 83 EE 0C 89   6..;6..u ........
BA70:  36 10 00 C3 89 3E 96 00  E8 40 EB B0 00 BE 30 0A   6....>.. .@....0.
BA80:  E8 C6 FE 73 36 8B F7 BF  4A 00 E8 C3 EB 56 BE 3C   ...s6... J....V.<
BA90:  0A E8 9C FE 89 3E 96 00  E8 18 EB BE 24 0A E8 8F   .....>.. ....$...
BAA0:  FE E8 09 EB 5E 57 8B FE  BE 3C 0A E8 82 FE 89 3E   ....^W.. .<.....>
BAB0:  96 00 E8 18 EB 5E E8 0C  EB B0 01 50 8B F7 BB 0C   .....^.. ...P....
BAC0:  0B E8 E4 FE 89 3E 96 00  E8 F0 EA 58 0A C0 74 09   .....>.. ...X..t.
BAD0:  BE 48 0A E8 5A FE E8 F4  EA C3 8B 36 10 00 E8 01   .H..Z... ...6....
BAE0:  00 C3 BB 7C 0B E8 C0 FE  57 87 F7 89 3E 96 00 E8   ...|.... W...>...
BAF0:  BB EA 8B F7 5F 89 3E 96  00 E8 BF EA FF 45 08 8B   ...._.>. .....E..
BB00:  F7 C3 8B 3E 10 00 8B F7  8B 44 0A 83 EF 0C E8 19   ...>.... .D......
BB10:  00 8B 36 10 00 8B 36 10  00 3B 36 0E 00 75 03 E8   ..6...6. .;6..u..
BB20:  23 DD 83 EE 0C 89 36 10  00 C3 56 8B F7 BF 5A 00   #.....6. ..V...Z.
BB30:  E8 1D EB 8B FE 5E 57 BF  66 00 E8 13 EB 8B 5D 08   .....^W. f.....].
BB40:  C7 45 08 00 00 BE 54 0A  E8 FE FD 77 04 FF 4D 08   .E....T. ...w..M.
BB50:  43 53 BE 24 0A E8 D8 FD  89 3E 96 00 E8 4E EA 8B   CS.$.... .>...N..
BB60:  F7 5B 5F 53 E8 69 00 5B  33 C0 0B DB 74 39 8B D0   .[_S.i.[ 3...t9..
BB70:  79 04 B2 80 F7 DB B9 10  00 49 D1 E3 73 FB 57 D1   y....... .I..s.W.
BB80:  DB BF 66 00 AB AB AB 8B  C3 AB 8B C1 AB 8B C2 AB   ..f..... ........
BB90:  BF 5A 00 BE 66 00 89 3E  96 00 E8 16 EA 8B F7 5F   .Z..f..> ......._
BBA0:  89 3E 96 00 E8 26 EA C3  8B 3E 10 00 8B F7 8B 44   .>...&.. .>.....D
BBB0:  0A 83 EF 0C E8 19 00 8B  36 10 00 8B 36 10 00 3B   ........ 6...6..;
BBC0:  36 0E 00 75 03 E8 7D DC  83 EE 0C 89 36 10 00 C3   6..u..}. ....6...
BBD0:  57 BF 4A 00 E8 79 EA 56  BE 60 0A E8 52 FD 89 3E   W.J..y.V .`..R..>
BBE0:  96 00 E8 E8 E9 5E E8 DC  E9 FF 45 08 8B F7 BB C8   .....^.. ..E.....
BBF0:  0B E8 B4 FD 89 3E 96 00  E8 C0 E9 8B F7 5F 89 3E   .....>.. ....._.>
BC00:  96 00 E8 AE E9 C3 08 1C  B2 00 0B 00 B0 1E 0E 1F   ........ ........
BC10:  B8 02 35 CD 21 89 1E 72  26 8C 06 74 26 BA D2 26   ..5.!..r &..t&..&
BC20:  B8 02 25 CD 21 B8 23 35  CD 21 89 1E 76 26 8C 06   ..%.!.#5 .!..v&..
BC30:  78 26 BA BA 26 B8 23 25  CD 21 1F C3 1E 50 52 B8   x&..&.#% .!...PR.
BC40:  02 25 2E C5 16 72 26 CD  21 5A 58 1F C3 50 52 1E   .%...r&. !ZX..PR.
BC50:  E8 E9 FF 2E C5 16 76 26  B8 23 25 CD 21 1F 5A 58   ......v& .#%.!.ZX
BC60:  2E FF 2E 76 26 90 2E DD  3E 70 26 51 B9 03 00 E2   ...v&... >p&Q....
BC70:  FE 59 2E F6 06 70 26 80  74 04 E8 F4 DB CF 2E FF   .Y...p&. t.......
BC80:  2E 72 26 76 00 B2 00 0E  00 B0 A9 00 00 00 51 01   .r&v.... ......Q.
BC90:  06 00 B2 00 90 00 B0 01  01 00 B2 00 B3 CC B0 4D   ........ .......M
BCA0:  53 20 52 75 6E 2D 54 69  6D 65 20 4C 69 62 72 61   S Run-Ti me Libra
BCB0:  72 79 20 2D 20 43 6F 70  79 72 69 67 68 74 20 28   ry - Cop yright (
```

```
BCC0:  63 29 20 31 39 39 30 2C  20 4D 69 63 72 6F 73 6F   c) 1990,  Microso
BCD0:  66 74 20 43 6F 72 70 18  00 0A 65 6E 74 65 72 20   ft Corp. ..enter
BCE0:  6E 61 6D 65 20 28 75 70  20 74 6F 20 35 20 63 68   name (up  to 5 ch
BCF0:  61 72 61 63 74 65 72 73  29 20 6F 72 20 27 65 78   aracters ) or 'ex
BD00:  69 74 27 20 3E 20 00 25  73 00 65 78 69 74 00 25   it' > .% s.exit.%
BD10:  73 25 31 64 00 67 72 61  62 20 65 72 72 6F 72 21   s%1d.gra b error!
BD20:  0A 00 00 49 6E 73 75 66  66 69 63 69 65 6E 74 20   ...Insuf ficient
BD30:  6D 65 6D 6F 72 79 0A 00  20 67 65 74 5F 69 6D 61   memory..  get_ima
BD40:  67 65 20 65 72 72 6F 72  3A 20 66 69 6C 65 20 6E   ge error : file n
BD50:  6F 74 20 63 6F 6D 70 6C  65 74 65 0A 00 A0 01 40   ot compl ete....@
BD60:  00 80 01 00 00 47 3A 5C  46 49 4E 47 45 52 5C 49   .....G:\ FINGER\I
BD70:  4D 47 44 31 31 5C D7 00  B2 00 0D 00 B0 E8 03 E8   MGD11\.. ........
BD80:  03 46 50 32 30 30 30 2E  43 46 47 00 70 6F 73 69   .FP2000. CFG.posi
BD90:  74 69 6F 6E 20 58 20 6F  75 74 20 6F 66 20 72 61   tion X o ut of ra
BDA0:  6E 67 65 20 25 68 64 0A  00 70 6F 73 69 74 69 6F   nge %hd. .positio
BDB0:  6E 20 59 20 6F 75 74 20  6F 66 20 72 61 6E 67 65   n Y out  of range
BDC0:  20 25 68 64 0A 00 72 62  00 66 69 6C 65 20 25 73    %hd..rb .file %s
BDD0:  20 6E 6F 74 20 66 6F 75  6E 64 0A 00 20 2D 2D 20    not fou nd.. --
BDE0:  69 6E 76 61 6C 69 64 20  6E 75 6D 62 65 72 20 6F   invalid  number o
BDF0:  66 20 63 6F 6C 6F 6D 6E  73 3A 20 25 68 64 20 69   f colomn s: %hd i
BE00:  6E 73 74 65 61 64 20 6F  66 20 25 68 64 0A 00 20   nstead o f %hd..
BE10:  2D 2D 20 69 6E 76 61 6C  69 64 20 6E 75 6D 62 65   -- inval id numbe
BE20:  72 20 6F 66 20 72 6F 77  73 3A 20 25 68 64 20 69   r of row s: %hd i
BE30:  6E 73 74 65 61 64 20 6F  66 20 25 68 64 0A 00 77   nstead o f %hd..w
BE40:  62 00 4B 4F 00 6C 73 65  6E 73 6F 72 2E 63 66 67   b.KO.lse nsor.cfg
BE50:  00 72 74 00 25 68 64 00  20 53 65 6E 73 6F 72 20   .rt.%hd.  Sensor
BE60:  23 20 25 68 64 20 6E 6F  74 20 66 6F 75 6E 64 20   # %hd no t found
BE70:  69 6E 20 25 73 0A 00 25  68 64 00 25 68 64 20 25   in %s..% hd.%hd %
BE80:  68 64 20 25 68 64 20 25  68 64 20 25 68 64 20 25   hd %hd % hd %hd %
BE90:  68 64 20 25 68 64 00 20  25 73 20 6E 6F 74 20 66   hd %hd.  %s not f
BEA0:  6F 75 6E 64 0A 00 47 3A  5C 46 49 4E 47 45 52 5C   ound..G: \FINGER\
BEB0:  49 4D 47 49 5C 00 47 3A  5C 46 49 4E 47 45 52 5C   IMGI\.G: \FINGER\
BEC0:  49 4D 47 44 5C 00 47 3A  5C 46 49 4E 47 45 52 5C   IMGD\.G: \FINGER\
BED0:  49 4D 47 44 31 31 5C 00  49 4D 47 44 5C 00 00 6E   IMGD11\. IMGD\..n
BEE0:  6F 5F 6D 65 6D 6F 72 79  20 66 6F 72 20 70 61 72   o_memory  for par
BEF0:  72 61 79 76 01 B2 00 08  00 B0 25 73 25 30 33 64   rayv.... ..%s%03d
BF00:  25 64 00 53 61 76 65 20  74 6F 20 66 69 6C 65 6E   %d.Save  to filen
BF10:  61 6D 65 3A 20 25 73 20  53 61 6D 70 6C 65 20 6E   ame: %s  SAMPLEle n
BF20:  75 6D 62 65 72 3A 25 73  00 45 6E 74 65 72 20 6E   umber:%s .Enter n
BF30:  61 6D 65 20 28 75 70 20  74 6F 20 35 20 63 68 61   ame (up  to 5 cha
BF40:  72 73 29 20 3D 3E 20 00  25 73 00 53 61 76 69 6E   rs) => . %s.Savin
BF50:  67 2E 2E 2E 20 00 2E 69  6D 67 00 2E 69 6D 67 00   g... ..i mg..img.
BF60:  42 65 67 69 6E 20 77 69  74 68 20 6E 65 77 20 70   Begin wi th new p
BF70:  65 72 73 6F 6E 00 49 6D  61 67 65 20 6E 6F 74 20   erson.Im age not
BF80:  73 61 76 65 64 00 53 65  72 69 61 6C 20 6E 75 6D   saved.Se rial num
BF90:  62 65 72 20 74 6F 20 62  65 67 69 6E 3A 20 00 25   ber to b egin: .%
BFA0:  64 00 53 61 6D 70 6C 65  20 6E 75 6D 62 65 72 20   d.SAMPLEle  number
BFB0:  74 6F 20 62 65 67 69 6E  3A 20 00 25 64 00 01 00   to begin : .%d...
BFC0:  50 6C 61 63 65 20 79 6F  75 72 20 66 69 6E 67 65   Place yo ur finge
BFD0:  72 20 6F 6E 20 74 68 65  20 63 61 6D 65 72 61 20   r on the  camera
BFE0:  28 6F 72 20 70 72 65 73  73 20 45 53 43 20 74 6F   (or pres s ESC to
BFF0:  20 63 61 6E 63 65 6C 29  00 0A 53 65 72 69 61 6C    cancel) ..Serial
C000:  20 6E 75 6D 62 65 72 20  74 6F 20 62 65 67 69 6E    number  to begin
C010:  3A 20 00 25 64 00 0A 53  61 6D 70 6C 65 20 6E 75   : .%d..S ample nu
```

```
C020:  6D 62 65 72 20 74 6F 20  62 65 67 69 6E 3A 20 00   mber to  begin: .
C030:  25 64 00 0A 66 69 6E 67  65 72 20 6E 75 6D 62 65   %d..fing er numbe
C040:  72 20 74 6F 20 62 65 67  69 6E 3A 20 00 25 64 00   r to beg in: .%d.
C050:  0A 25 73 00 25 73 25 73  2E 69 6D 67 00 0A 73 61   .%s.%s%s .img..sa
C060:  76 69 6E 67 20 25 73 00  20 52 65 76 20 30 2E 36   ving %s.  Rev 0.6
C070:  00 00 D8 03 80 18 08 00  67 72 61 62 62 65 72 2E   ........ grabber.
C080:  63 66 67 89 01 B2 00 27  00 B0 64 00 64 00 01 00   cfg....' ..d.d...
C090:  00 03 00 00 05 00 88 13  03 00 77 74 00 25 68 64   ........ ..wt.%hd
C0A0:  20 25 68 64 00 72 74 00  25 68 64 20 25 68 64 00    %hd.rt. %hd %hd.
C0B0:  20 52 65 76 20 30 2E 36  00 00 40 04 80 18 84 03    Rev 0.6 ..@.....
C0C0:  64 00 FF 01 3A 00 B2 FF  10 00 B0 00 00 30 02 04   d...:... .....0..
C0D0:  00 B2 00 22 00 B0 60 01  80 01 00 00 00 00 11 00   ..."..`. ........
C0E0:  22 00 34 00 45 00 57 00  69 00 7A 00 8C 00 9E 00   ".4.E.W. i.z.....
C0F0:  B0 00 C2 00 D4 00 E6 00  F9 00 0B 01 1E 01 31 01   ........ ......1.
C100:  44 01 58 01 6B 01 7F 01  94 01 A8 01 BD 01 D2 01   D.X.k... ........
C110:  E7 01 FD 01 13 02 2A 02  41 02 58 02 70 02 89 02   ......*. A.X.p...
C120:  A2 02 BC 02 D6 02 F1 02  0D 03 29 03 47 03 65 03   ........ ..).G.e.
C130:  84 03 A4 03 C5 03 E8 03  0B 04 30 04 56 04 7E 04   ........ ..0.V.~.
C140:  A7 04 D2 04 FF 04 2F 05  60 05 94 05 CA 05 03 06   ....../. `.......
C150:  40 06 80 06 C4 06 0C 07  58 07 AA 07 02 08 60 08   @....... X.....`.
C160:  C6 08 33 09 AB 09 2D 0A  BB 0A 58 0B 05 0C C6 0C   ..3...-. ..X.....
C170:  9F 0D 94 0E AA 0F EB 10  60 12 18 14 27 16 A9 18   ........ `...'...
C180:  CB 1B D0 1F 2A 25 A6 2C  DC 37 89 4A DC 6F C9 DF   ....*%., .7.J.o..
C190:  00 00 01 00 01 00 02 00  02 00 03 00 03 00 04 00   ........ ........
C1A0:  04 00 05 00 06 00 06 00  07 00 07 00 08 00 08 00   ........ ........
C1B0:  09 00 09 00 0A 00 0B 00  0B 00 0C 00 0C 00 0D 00   ........ ........
C1C0:  0D 00 0E 00 0E 00 0F 00  0F 00 10 00 11 00 11 00   ........ ........
C1D0:  12 00 12 00 13 00 13 00  14 00 14 00 15 00 15 00   ........ ........
C1E0:  16 00 16 00 17 00 17 00  18 00 18 00 18 00 19 00   ........ ........
C1F0:  19 00 1A 00 1A 00 1A 00  1B 00 1C 00 1C 00 1D 00   ........ ........
C200:  1D 00 1D 00 1E 00 1E 00  1F 00 1F 00 20 00 20 00   ........ .... . .
C210:  20 00 21 00 21 00 22 00  22 00 22 00 23 00 23 00    .!.!.". ".".#.#.
C220:  23 00 24 00 24 00 25 00  25 00 25 00 26 00 26 00   #.$.$.%. %.%.&.&.
C230:  26 00 27 00 27 00 27 00  28 00 28 00 28 00 29 00   &.'.'.'. (.(.(.).
C240:  29 00 29 00 2A 00 2A 00  2A 00 2B 00 2B 00 2B 00   ).).*.*. *.+.+.+.
C250:  2C 00 2C 00 2C 00 2C 00  2D 00 10 27 0E 27 09 27   ,.,.,.,. -..'.'.'
C260:  02 27 F7 26 E9 26 D9 26  C5 26 AE 26 94 26 78 26   .'.&.&.& .&.&.&x&
C270:  58 26 35 26 0F 26 E6 25  BB 25 8C 25 5B 25 26 25   X&5&.&.% .%.%[%&%
C280:  EF 24 B4 24 77 24 37 24  F5 23 AF 23 67 23 1B 23   .$.$w$7$ .#.#g#.#
C290:  CE 22 7D 22 2A 22 D4 21  7B 21 20 21 C2 20 62 20   ."}"*".! {! !. b
C2A0:  FF 1F 9A 1F 32 1F C8 1E  5B 1E EC 1D 7B 1D 07 1D   ....2... [...{...
C2B0:  91 1C 19 1C 9F 1B 22 1B  A3 1A 23 1A A0 19 1B 19   ......". ..#.....
C2C0:  95 18 0C 18 82 17 F5 16  67 16 D7 15 46 15 B3 14   ........ g...F...
C2D0:  1E 14 88 13 F0 12 56 12  BB 11 1F 11 82 10 E3 0F   ......V. ........
C2E0:  43 0F A2 0E FF 0D 5C 0D  B7 0C 12 0C 6B 0B C4 0A   C.....\. ....k...
C2F0:  1C 0A 73 09 C9 08 1F 08  74 07 C8 06 1C 06 6F 05   ..s..... t.....o.
C300:  C2 04 15 04 67 03 B9 02  0B 02 5C 01 AE 00 00 00   ....g... ..\.....
C310:  00 00 AE 00 5C 01 0B 02  B9 02 67 03 15 04 C2 04   ....\... ..g.....
C320:  6F 05 1C 06 C8 06 74 07  1F 08 C9 08 73 09 1C 0A   o.....t. ....s...
C330:  C4 0A 6B 0B 12 0C B7 0C  5C 0D FF 0D A2 0E 43 0F   ..k..... \.....C.
C340:  E3 0F 82 10 1F 11 BB 11  56 12 F0 12 88 13 1E 14   ........ V.......
C350:  B3 14 46 15 D7 15 67 16  F5 16 82 17 0C 18 95 18   ..F...g. ........
C360:  1B 19 A0 19 23 1A A3 1A  22 1B 9F 1B 19 1C 91 1C   ....#... ".......
C370:  07 1D 7B 1D EC 1D 5B 1E  C8 1E 32 1F 9A 1F FF 1F   ..{...[. ..2.....
```

```
C380:  62 20 C2 20 20 21 7B 21  D4 21 2A 22 7D 22 CE 22   b .  !{! .!*"}"."
C390:  1B 23 67 23 AF 23 F5 23  37 24 77 24 B4 24 EF 24   .#g#.#.# 7$w$.$.$
C3A0:  26 25 5B 25 8C 25 BB 25  E6 25 0F 26 35 26 58 26   &%[%.%.% .%.&5&X&
C3B0:  78 26 94 26 AE 26 C5 26  D9 26 E9 26 F7 26 02 27   x&.&.&.& .&.&.&.'
C3C0:  09 27 0E 27 10 27 01 00  00 00 E6 01 00 00 00 00   .'.'.'.. ........
C3D0:  05 FB 02 B2 00 15 00 B0  5F 43 5F 46 49 4C 45 5F   ........ _C_FILE_
C3E0:  49 4E 46 4F 3D 0D 00 B2  00 1C 00 B0 14 00 81 81   INFO=... ........
C3F0:  81 01 01 07 00 B2 00 19  00 B0 E7 07 80 18 04 00   ........ ........
C400:  B2 00 0D 00 B0 FF FF FF  FF 20 17 00 00 00 00 00   ........ . ......
C410:  16 02 02 18 0D 09 0C 0C  0C 07 08 16 16 FF 02 0D   ........ ........
C420:  12 02 FF 5C 00 5C 00 00  00 20 14 80 18 00 00 20   ...\.\.. . .....
C430:  14 80 18 01 2F 00 B2 00  0B 00 B0 02 01 02 00 B2   ..../... ........
C440:  00 0A 00 B0 02 02 02 00  B2 00 0A 00 B0 84 03 02   ........ ........
C450:  00 B2 00 0A 00 B0 02 04  02 00 B2 00 B4 00 B0 01   ........ ........
C460:  00 00 02 04 00 B2 00 EC  00 B0 FC 08 80 18 04 00   ........ ........
C470:  B2 00 0C 00 B0 20 09 2D  0D 5D 00 5D 00 06 00 00   ..... .- .].]....
C480:  06 00 01 00 00 10 00 03  06 00 06 02 10 04 45 45   ........ ......EE
C490:  45 05 05 05 05 05 35 30  00 50 00 00 00 00 20 20   E.....50 .P....
C4A0:  30 50 58 07 08 00 30 30  30 57 50 07 00 00 20 20   0PX...00 0WP...
C4B0:  00 00 00 00 00 08 60 60  60 60 60 60 00 00 70 70   ......`` ````..pp
C4C0:  78 78 78 78 08 07 08 00  00 07 00 08 08 08 00 00   xxxx.... ........
C4D0:  08 00 08 00 00 08 28 6E  75 6C 6C 29 06 68 00 B2   ......(n ull).h..
C4E0:  00 10 00 B0 03 00 00 20  C4 02 35 04 C4 02 35 04   .......  ..5...5.
C4F0:  C4 02 35 04 C4 02 35 04  C4 02 35 04 C4 02 35 04   ..5...5. ..5...5.
C500:  00 00 00 00 01 01 00 23  00 B2 20 09 00 B0 28 28   .......# .. ...((
C510:  28 28 28 05 00 B2 20 12  00 B0 48 01 00 B2 10 0F   (((... . ..H.....
C520:  00 B0 84 0A 00 B0 10 10  10 10 10 10 10 81 81 81   ........ ........
C530:  81 81 81 0D 00 B2 01 14  00 B0 10 10 10 10 10 10   ........ ........
C540:  82 82 82 82 82 82 0C 00  B2 02 14 00 B0 10 10 10   ........ ........
C550:  10 20 05 00 B2 00 81 00  B0 FF FF FF FF 1E 00 3B   . ...... .......;
C560:  00 5A 00 78 00 97 00 B5  00 D4 00 F3 00 11 01 30   .Z.x.... .......0
C570:  01 4E 01 6D 01 FF FF 1E  00 3A 00 59 00 77 00 96   .N.m.... .:.Y.w..
C580:  00 B4 00 D3 00 F2 00 10  01 2F 01 4D 01 6C 01 54   ........ ./.M.l.T
C590:  5A 00 00 50 53 54 00 50  44 54 00 80 70 00 00 01   Z..PST.P DT..p...
C5A0:  00 DE 0B 80 18 E2 0B 80  18 53 75 6E 4D 6F 6E 54   ........ .SunMonT
C5B0:  75 65 57 65 64 54 68 75  46 72 69 53 61 74 00 4A   ueWedThu FriSat.J
C5C0:  61 6E 46 65 62 4D 61 72  41 70 72 4D 61 79 4A 75   anFebMar AprMayJu
C5D0:  6E 4A 75 6C 41 75 67 53  65 70 4F 63 74 4E 6F 76   nJulAugS epOctNov
C5E0:  44 65 63 8A 00 B2 00 2B  00 B0 06 31 23 53 4E 41   Dec....+ ...1#SNA
C5F0:  4E 06 31 23 51 4E 41 4E  05 31 23 49 4E 46 05 31   N.1#QNAN .1#INF.1
C600:  23 49 4E 44 00 00 00 00  32 13 00 80 66 24 00 80   #IND.... 2...f$..
C610:  E0 37 79 C3 41 43 00 06  31 23 53 4E 41 4E 06 31   .7y.AC.. 1#SNAN.1
C620:  23 51 4E 41 4E 05 31 23  49 4E 46 05 31 23 49 4E   #QNAN.1# INF.1#IN
C630:  44 00 FC FF FF FF FF FF  FF FE 43 65 2B 30 30 30   D....... ..Ce+000
C640:  56 00 B2 00 2D 00 B0 30  31 30 32 30 33 30 34 30   V...-..0 10203040
C650:  35 30 36 30 37 30 38 30  39 31 30 31 31 31 32 05   50607080 9101112.
C660:  4D 36 31 78 78 00 00 30  49 35 04 10 44 35 04 BC   M61xx..0 I5..D5..
C670:  44 35 04 A0 43 35 04 8E  44 35 04 DC 4F 35 04 FF   D5..C5.. D5..O5..
C680:  FF FF FF FF FF EF 7F 00  00 00 00 00 00 E4 00 E4   ........ ........
C690:  00 E4 00 00 00 00 00 AB  0B 00 00 3A 00 3C 09 69   ........ ...:.<.i
C6A0:  01 AB 0B DC 4B 35 04 E2  30 35 04 20 4C 35 04 74   ....K5.. 05. L5.t
C6B0:  0F 35 04 80 18 80 18 C2  0B C2 0B C2 0B C2 0B C2   .5...... ........
C6C0:  0B C2 0B 80 18 80 18 80  18 80 18 C2 0B C2 0B C2   ........ ........
C6D0:  0B C2 0B C2 0B C2 0B C2  0B 80 18 80 18 80 18 98   ........ ........
```

```
C6E0:  00 B2 00 08 00 B0 3C 3C  4E 4D 53 47 3E 3E 00 00   ......<< NMSG>>..
C6F0:  52 36 30 30 30 0D 0A 2D  20 73 74 61 63 6B 20 6F   R6000..-  stack o
C700:  76 65 72 66 6C 6F 77 0D  0A 00 03 00 52 36 30 30   verflow. ....R600
C710:  33 0D 0A 2D 20 69 6E 74  65 67 65 72 20 64 69 76   3..- int eger div
C720:  69 64 65 20 62 79 20 30  0D 0A 00 09 00 52 36 30   ide by 0 .....R60
C730:  30 39 0D 0A 2D 20 6E 6F  74 20 65 6E 6F 75 67 68   09..- no t enough
C740:  20 73 70 61 63 65 20 66  6F 72 20 65 6E 76 69 72    space f or envir
C750:  6F 6E 6D 65 6E 74 0D 0A  00 FC 00 0D 0A 00 FF 00   onment.. ........
C760:  72 75 6E 2D 74 69 6D 65  20 65 72 72 6F 72 20 00   run-time  error .
C770:  02 00 52 36 30 30 32 0D  0A 2D 20 66 6C 6F 61 74   ..R6002. .- float
C780:  69 6E 67 2D 70 6F 69 6E  74 20 73 75 70 70 6F 72   ing-poin t suppor
C790:  74 20 6E 6F 74 20 6C 6F  61 64 65 64 0D 0A 00 01   t not lo aded....
C7A0:  00 52 36 30 30 31 0D 0A  2D 20 6E 75 6C 6C 20 70   .R6001.. - null p
C7B0:  6F 69 6E 74 65 72 20 61  73 73 69 67 6E 6D 65 6E   ointer a ssignmen
C7C0:  74 0D 0A 00 FD 00 3A 20  4D 41 54 48 0D 0A 2D 20   t.....:  MATH..-
C7D0:  66 6C 6F 61 74 69 6E 67  2D 70 6F 69 6E 74 20 65   floating -point e
C7E0:  72 72 6F 72 3A 20 00 65  00 69 6E 76 61 6C 69 64   rror: .e .invalid
C7F0:  0D 0A 00 66 00 64 65 6E  6F 72 6D 61 6C 0D 0A 00   ...f.den ormal...
C800:  67 00 64 69 76 69 64 65  20 62 79 20 30 0D 0A 00   g.divide  by 0...
C810:  68 00 6F 76 65 72 66 6C  6F 77 0D 0A 00 69 00 75   h.overfl ow...i.u
C820:  6E 64 65 72 66 6C 6F 77  0D 0A 00 6A 00 69 6E 65   nderflow ...j.ine
C830:  78 61 63 74 0D 0A 00 6B  00 75 6E 65 6D 75 6C 61   xact...k .unemula
C840:  74 65 64 0D 0A 00 6C 00  73 71 75 61 72 65 20 72   ted...l. square r
C850:  6F 6F 74 0D 0A 00 6D 00  0D 0A 00 6E 00 73 74 61   oot...m. ...n.sta
C860:  63 6B 20 6F 76 65 72 66  6C 6F 77 0D 0A 00 6F 00   ck overf low...o.
C870:  73 74 61 63 6B 20 75 6E  64 65 72 66 6C 6F 77 0D   stack un derflow.
C880:  0A 00 70 00 65 78 70 6C  69 63 69 74 6C 79 20 67   ..p.expl icitly g
C890:  65 6E 65 72 61 74 65 64  0D 0A 00 FF FF FF B8 01   enerated ........
C8A0:  B2 00 0C 00 B0 FF FF FF  FF FF FF FF FF FF FF FF   ........ ........
C8B0:  1A 00 35 04 00 00 81 05  20 4E E2 19 74 19 01 00   ..5.....  N..t...
C8C0:  52 42 8C C0 05 10 00 0E  1F A3 04 00 03 06 0C 00   RB...... ........
C8D0:  8E C0 8B 0E 06 00 8B F9  4F 8B F7 FD F3 A4 8B 16   ........ O.......
C8E0:  0E 00 50 B8 38 00 50 CB  8C C3 8C D8 2B C2 8E D8   ..P.8.P. ....+...
C8F0:  8E C0 BF 0F 00 B9 10 00  B0 FF F3 AE 47 8B F7 8B   ........ ....G...
C900:  C3 2B C2 8E C0 BF 0F 00  B1 04 8B C6 F7 D0 D3 E8   .+...... ........
C910:  74 09 8C DA 2B D0 8E DA  83 CE F0 8B C7 F7 D0 D3   t...+... ........
C920:  E8 74 09 8C C2 2B D0 8E  C2 83 CF F0 AC 8A D0 4E   .t...+.. .......N
C930:  AD 8B C8 46 8A C2 24 FE  3C B0 75 06 AC F3 AA EB   ...F..$. <.u.....
C940:  07 90 3C B2 75 6B F3 A4  8A C2 A8 01 74 BA BE 2D   ..<.uk.. ....t..-
C950:  01 0E 1F 8B 1E 04 00 FC  33 D2 AD 8B C8 E3 13 8B   ........ 3.......
C960:  C2 03 C3 8E C0 AD 8B F8  83 FF FF 74 11 26 01 1D   ........ ...t.&..
C970:  E2 F3 81 FA 00 F0 74 16  81 C2 00 10 EB DC 8C C0   ......t. ........
C980:  40 8E C0 83 EF 10 26 01  1D 48 8E C0 EB E2 8B C3   @.....&. .H......
C990:  8B 3E 08 00 8B 36 0A 00  03 F0 01 06 02 00 2D 10   .>...6.. ......-.
C9A0:  00 8E D8 8E C0 BB 00 00  FA 8E D6 8B E7 FB 2E FF   ........ ........
C9B0:  2F B4 40 BB 02 00 B9 16  00 8C CA 8E DA BA 17 01   /.@..... ........
C9C0:  CD 21 B8 FF 4C CD 21 50  61 63 6B 65 64 20 66 69   .!..L.!P acked fi
C9D0:  6C 65 20 69 73 20 63 6F  72 72 75 70 74 E9 01 CC   le is co rrupt...
C9E0:  00 BB 00 88 00 73 00 6B  00 41 00 2F 00 1D 00 10   .....s.k .A./....
C9F0:  00 92 01 82 01 5B 01 49  01 25 01 E9 00 C0 01 BC   .....[.I .%......
CA00:  02 A0 02 93 02 6F 02 F8  01 E8 01 3E 04 2E 04 DC   .....o.. ...>....
CA10:  03 C9 03 B9 03 A9 03 91  03 6B 03 50 03 25 03 BB   ........ .k.P.%..
CA20:  04 69 04 56 04 4D 06 27  06 0C 06 D0 05 BE 05 A9   .i.V.M.' ........
CA30:  05 80 05 6D 05 5C 05 49  05 38 05 1F 05 21 07 06   ...m.\.I .8...!..
```

```
CA40: 07 D9 06 11 08 05 08 F0  07 E2 07 A3 07 89 07 7D  ........ .......}
CA50: 07 58 07 63 08 5E 08 59  08 51 08 4A 08 42 08 B6  .X.c.^.Y .Q.J.B..
CA60: 08 A1 08 8C 08 F4 08 11  09 4D 09 75 09 B1 09 A1  ........ .M.u....
CA70: 09 92 09 D9 09 01 0A 4B  0C 38 0C 14 0C 01 0C DB  .......K .8......
CA80: 0B C9 0B B6 0B A6 0B 90  0B 6C 0B 56 0B 39 0B 2C  ........ .l.V.9.,
CA90: 0B 23 0B F0 0A DE 0A C1  0A AE 0A 99 0A 8C 0A 7A  .#...... .......z
CAA0: 0A 5D 0A 4C 0A 31 0A 49  0D 37 0D 22 0D 10 0D E7  .].L.1.I .7."....
CAB0: 0C C8 0C 92 0C AB 0D 8F  0D 86 0D 7E 0D 29 0E 17  ........ ...~.)..
CAC0: 0E FC 0D EA 0D DD 0D CB  0D 82 0E 67 0E 5A 0E BE  ........ ...g.Z..
CAD0: 0E 41 0F 1E 0F 0B 0F FA  0E 87 0F E1 0F D1 0F B6  .A...... ........
CAE0: 0F A6 0F D7 10 AD 10 70  10 46 10 0B 10 D9 11 AF  .......p .F......
CAF0: 11 72 11 48 11 0D 11 5F  12 4F 12 3F 12 2F 12 1F  .r.H..._ .O.?./..
CB00: 12 0F 12 9F 12 8F 12 7F  12 6F 12 CE 12 05 13 6F  ........ .o.....o
CB10: 13 6A 13 4D 13 48 13 32  13 1F 13 AD 13 9D 13 8D  .j.M.H.2 ........
CB20: 13 83 13 FF 13 F7 13 EB  13 DF 13 CC 13 57 14 4B  ........ .....W.K
CB30: 14 29 14 1D 14 05 15 D5  14 B7 14 6C 15 83 15 36  .)...... ...l...6
CB40: 17 18 17 EE 16 D3 16 CE  16 BE 16 46 16 2F 16 5A  ........ ...F./.Z
CB50: 1A F5 18 E1 18 CD 18 AF  18 95 18 7B 18 62 18 4B  ........ ...{.b.K
CB60: 18 34 18 21 18 A8 17 7E  17 60 17 0E 1B F9 1A 82  .4.!...~ .`......
CB70: 1B 7F 1E 6F 1E 4F 1E 16  1E 04 1E FF 1D D5 1D B3  ...o.O.. ........
CB80: 21 56 21 40 21 CF 20 B6  20 9C 20 23 20 EE 1F DC  !V!@!. .  . # ...
CB90: 1F AD 1F 78 1F 66 1F 37  1F 04 1F F2 1E C4 1E BF  ...x.f.7 ........
CBA0: 1E 7B 22 6D 22 4E 22 E2  22 D4 22 C6 22 9C 22 0B  .{"m"N". ".".".".
CBB0: 23 03 23 31 23 29 23 60  23 55 23 8F 23 84 23 D6  #.#1#)#` #U#.#.#.
CBC0: 23 BC 23 0B 24 00 24 37  24 2C 24 94 24 FD 24 D5  #.#.$.$7 $,$.$.$.
CBD0: 24 67 25 3D 25 B1 25 93  25 62 26 44 26 8E 26 82  $g%=%.%. %b&D&.&.
CBE0: 26 79 26 A9 26 C4 26 3C  27 31 27 21 27 01 27 F0  &y&.&.&< '1'!'.'.
CBF0: 26 DB 26 76 27 65 27 50  27 B6 27 AB 27 96 27 1A  &.&v'e'P '.'.'.'.
CC00: 28 15 28 10 28 00 28 F4  27 D6 27 CE 27 86 28 63  (.(.(.(. '.'.'.(c
CC10: 28 57 28 3B 28 2E 28 AD  28 C8 28 22 29 72 29 61  (W(;(.(. (.(")r)a
CC20: 29 E4 29 16 2A 02 2A 44  2A 5F 2A 92 2A 86 2A 7A  ).).*.*D *_*.*.*z
CC30: 2A 65 2B 1B 2B DF 2A 2C  2C F4 2B B8 2B 74 2C F0  *e+.+.*, ,.+.+t,.
CC40: 2C 8C 2D 81 2D 59 2D D7  2D C0 2D A6 2D 04 2E FF  ,.-.-Y-. -.-.-...
CC50: 2D 24 2E 1C 2E 4A 2E 45  2E 40 2E 38 2E 14 2F D2  -$...J.E .@.8../.
CC60: 2E C1 2E 2C 2F 44 2F 5D  2F 77 2F 91 2F AC 2F AC  ...,/D/] /w/././.
CC70: 30 76 30 4E 30 27 30 09  30 31 31 20 31 10 31 FA  0v0N0'0. 011 1.1.
CC80: 30 EE 30 DE 30 CE 30 FA  32 ED 32 AA 33 89 33 65  0.0.0.0. 2.2.3.3e
CC90: 33 57 33 D0 35 0C 36 F6  35 15 37 FC 36 D0 36 B2  3W3.5.6. 5.7.6.6.
CCA0: 36 83 36 65 36 93 37 85  37 72 37 61 37 47 37 25  6.6e6.7. 7r7a7G7%
CCB0: 3A 01 3A 6F 39 4B 39 E2  3C D4 3B 24 3B F0 3D 33  :.:o9K9. <.;$;.=3
CCC0: 3F 18 3F E6 3E B4 3E 97  3F 89 3F BC 3F DC 3F 02  ?.?.>.>. ?.?.?.?.
CCD0: 40 45 43 E7 41 C9 41 BF  41 B5 41 9D 41 93 41 89  @EC.A.A. A.A.A.A.
CCE0: 41 78 43 06 44 0B 44 12  44 2D 44 67 44 C0 93 88  AxC.D.D. D-DgD...
CCF0: 45 21 49 3C 4A 2F 4A 15  4A F4 49 D8 49 B3 49 9D  E!I<J/J. J.I.I.I.
CD00: 4A 82 4A 5D 4A C9 4A 70  4C 35 4E 6C 4E 19 50 44  J.J]J.Jp L5NlN.PD
CD10: 50 29 51 E6 51 F7 52 9A  52 D5 54 21 53 E8 57 D6  P)Q.Q.R. R.T!S.W.
CD20: 57 48 57 2F 5B 11 5B 36  65 45 66 4B 66 F1 67 65  WHW/[.[6 eEfKf.ge
CD30: 6A 56 6A 9A 6B 07 6C E6  6B C9 6B CA 6D A1 6D 50  jVj.k.l. k.k.m.mP
CD40: 6E 2C 6E 9F 6E 84 6E AF  6F A2 6F A5 70 87 70 0D  n,n.n.n. o.o.p.p.
CD50: 70 F4 6F E7 6F D6 6F C3  6F 05 71 DD 71 90 71 86  p.o.o.o. o.q.q.q.
CD60: 71 6E 71 3F 71 28 71 BF  73 81 73 6E 73 5B 73 33  qnq?q(q. s.sns[s3
CD70: 73 04 73 3A 74 15 74 F7  73 5D 74 25 94 2F 94 86  s.s:t.t. s]t%./..
CD80: 94 9C 94 FD 94 24 95 46  95 8C 95 71 8B BF 8A 8F  .....$.F ...q....
CD90: 8A 72 89 18 89 D7 88 61  88 43 88 23 88 0E 8D F4  .r.....a .C.#....
```

SAMPLE.DMP Thursday, January 6, 1994 12:01pm Page 62


```
CDA0:  8C 01 8C C5 8B 2F 8F 3F  8F 54 8F 5D 8F 69 8F 6E   ...../.? .T.].i.n
CDB0:  8F 31 00 48 95 4A 95 4C  95 4E 95 50 95 52 95 54   .1.H.J.L .N.P.R.T
CDC0:  95 56 95 58 95 5A 95 5C  95 5E 95 60 95 E4 8B 62   .V.X.Z.\ .^.`...b
CDD0:  95 64 95 66 95 68 95 4C  8C 6A 95 6C 95 2C 95 E5   .d.f.h.L .j.l.,..
CDE0:  8F 46 95 20 90 1A 90 FA  91 6E 95 86 92 8A 92 8E   .F. .... .n......
CDF0:  92 92 92 96 92 9A 92 70  95 F2 93 EE 93 3E 95 72   .......p .....>.r
CE00:  95 32 95 36 95 3A 95 FE  94 02 95 06 95 0A 95 0E   .2.6.:.. ........
CE10:  95 12 95 42 95 00 00 00  00 00 00 00 00 00 00 00   ...B.... ........
CE20:  00 00 00 00 00 00 00 00  00 00 00 00 00 00 00 00   ........ ........
CE30:  00
```


## Claims

**1.** Apparatus for processing a topological representation of a fingerprint, the apparatus comprising:

a topological fingerprint representation generation unit operative to generate a topological representation of a fingerprint including for each node along a ridge-representing graph, an indication of all neighboring nodes along the ridge-representing graph.

**2.** Apparatus for fingerprint verification comprising:

a fingerprint representation unit operative to provide two topological representations of two respective fingerprints; and

a topological fingerprint representation comparison unit operative to compare the two topological representations of the two respective fingerprints and to provide an output indication of the extent of similarity therebetween.

**3.** A topological fingerprint bank comprising:

a topologically represented fingerprint bank in which is stored at least one topological representation of at least one fingerprint.

**4.** A method for processing a topological representation of a fingerprint, the method comprising :

generating a topological representation of a fingerprint including, for each node along a ridge-representing graph, an indication of all neighboring nodes along the ridge-representing graph.

**5.** A method for fingerprint verification comprising:

receiving two topological representations of two respective fingerprints; and

subsequently comparing the two topological representations of the two respective fingerprints and providing an output indication of the extent of similarity therebetween.

**6.** A method for enhancing a topological representation of a fingerprint, the method comprising :

providing a topological representation of a fingerprint including a multiplicity of nodes;

processing the topological representation of the fingerprint so as to eliminate at least one impossible topological feature therefrom.

**7.** A method for binarizing gray level images including at least one elongate configuration, the method comprising:

receiving a gray level image;

locating at least one elongate configuration in the gray level image;

moving along the at least one elongate configuration, binarizing the at least one elongate configuration in the course of moving therealong; and

providing an indication of at least one binarized elongate configuration.

**8.** A method for matching fingerprints comprising:

providing at least two fingerprints from each of a multiplicity of individuals;

deriving a plurality of fingerprint characteristics from each fingerprint;

statistically analyzing the plurality of fingerprint characteristics, thereby to identify a subset of fingerprint characteristics which predict a fingerprint match; and

constructing fingerprint matching apparatus operative to match first and second fingerprints on the basis of the subset of fingerprint characteristics.

**9.** A fingerprint matching method comprising :

comparing a first fingerprint image of known quality to a second fingerprint image, thereby to provide a similarity score; and

providing an output indication that the first and second fingerprint images match if the similarity score exceeds a predetermined similarity threshold,

wherein the predetermined similarity threshold is selected in accordance with the known quality of the first fingerprint image.

**10.** A method for processing a topological representation of a fingerprint, the method comprising :

generating a topological representation of a fingerprint including for each node along a ridge-representing graph, an indication of all neighboring nodes along the ridge-representing graph.

**11.** Apparatus for processing a topological representation of a fingerprint, the apparatus comprising:

apparatus for generating a topological representation of a fingerprint including, for each node along a ridge-representing graph, an indication of all neighboring nodes along the ridge-representing graph.

**12.** Apparatus for fingerprint verification comprising:

apparatus for receiving two topological representations of two respective fingerprints; and

apparatus for subsequently comparing the two topological representations of the two respective fingerprints and providing an output indication of the extent of similarity therebetween.

**13.** Apparatus for enhancing a topological representation of a fingerprint, the apparatus comprising:

apparatus for providing a topological representation of a fingerprint including a multiplicity of nodes; and

apparatus for processing the topological representation of the fingerprint so as to eliminate at least one impossible topological feature therefrom.

**14.** Apparatus for binarizing gray level images including at least one elongate configuration, the apparatus comprising:

apparatus for receiving a gray level image;

apparatus for locating at least one elongate configuration in the gray level image;

apparatus for moving along the at least one elongate configuration, binarizing the at least one elongate configuration in the course of moving therealong; and

apparatus for providing an indication of at least one binarized elongate configuration.

**15.** Apparatus for matching fingerprints comprising:

apparatus for providing at least two fingerprints from each of a multiplicity of individuals;

apparatus for deriving a plurality of fingerprint characteristics from each fingerprint;

apparatus for statistically analyzing the plurality of fingerprint characteristics, thereby to identify a subset of fingerprint characteristics which predict a fingerprint match; and

apparatus for constructing fingerprint matching apparatus operative to match first and second fingerprints on the basis of the subset of fingerprint characteristics.

**16.** A fingerprint matching apparatus comprising:

apparatus for comparing a first fingerprint image of known quality to a second fingerprint image, thereby to provide a similarity score; and

apparatus for providing an output indication that the first and second fingerprint images match if the similarity score exceeds a predetermined similarity threshold,

wherein the predetermined similarity threshold is selected in accordann with the known quality of the first fingerprint image.

**17.** Apparatus for processing a topological representation of a fingerprint, the apparatus comprising:

apparatus for generating a topological representation of a fingerprint including for each node along

a ridge-representing graph, an indication of all neighboring nodes along the ridge-representing graph.

**18.** A fingerprint representation alignment method comprising:
matching first minutiae configurations each including a plurality of minutiae from a first fingerprint representation to second minutiae configurations each including a plurality of minutiae from a second fingerprint representation; and
identifying an alignment scheme suitable for aligning matched pairs of first and second minutiae configurations. wherein the predetermined similarity threshold is selected in accordance with the known quality of the first fingerprint image.

**19.** Apparatus for processing a topological representation of a fingerprint, the apparatus comprising:
apparatus for generating a topological representation of a fingerprint including for each node along a ridge-representing graph, an indication of all neighboring nodes along the ridge-representing graph.

**20.** A fingerprint representation alignment method comprising:
matching first minutiae configurations each including a plurality of minutiae from a first fingerprint representation to second minutiae configurations each including a plurality of minutiae from a second fingerprint representation; and
identifying an alignment scheme suitable for aligning matched pairs of first and second minutiae configurations.

**21.** A fingerprint representation alignment method comprising :
identifying an alignment scheme suitable for aligning a first fingerprint representation to a second fingerprint representation; and
using the results of said identifying to select a representative pair of matching first and second minutiae configurations from the first and second fingerprint representations, respectively;
computing a transformation from the first minutiae configuration to the second minutiae configuration; and
applying the transformation to all first minutiae in the first fingerprint representation.
wherein the predetermined similarity threshold is selected in accordance with the known quality of the first fingerprint image.

**22.** Apparatus for processing a topological representation of a fingerprint, the apparatus comprising:
apparatus for generating a topological representation of a fingerprint including for each node along a ridge-representing graph, an indication of all neighboring nodes along the ridge-representing graph.

**23.** A fingerprint representation alignment method comprising:
matching first minutiae configurations each including a plurality of minutiae from a first fingerprint representation to second minutiae configurations each including a plurality of minutiae from a second fingerprint representation; and
identifying an alignment scheme suitable for aligning matched pairs of first and second minutiae configurations.

**24.** Apparatus for sampling a fingerprint comprising:
a fingerprint imager operative to repeatedly image an individual's fingerprint;
a fingerprint analyzer operative to select a fingerprint image based on the fingerprint image development for the individual.

**25.** Apparatus for sampling a fingerprint comprising:
a fingerprint imager operative to repeatedly image a fingerprint;
a fingerprint quality characteristic analyzer operative to analyze at least one fingerprint quality characteristic other than a fingerprint variance characteristic and to select a fingerprint image at least on the basis of at least one quality characteristic.

**26.** Fingerprint sampling apparatus comprising:
a fingerprint imager generating a sequence of fingerprint images;
a fingerprint image analyzer operative to derive fingerprint image quality information from each of the sequence of fingerprint images; and

a fingerprint image quality indicator operative to provide a user discernible indication once the fingerprint image quality information for at least one image indicates that said image is of acceptable quality.

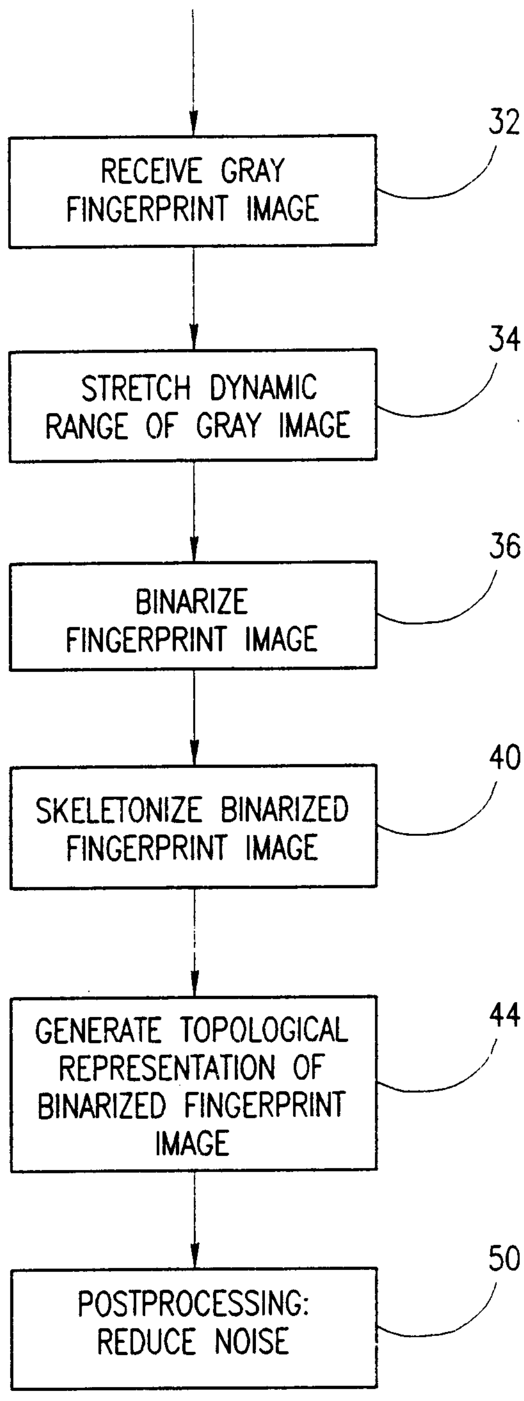
RECEIVE GRAY FINGERPRINT IMAGE
32
STRETCH DYNAMIC RANGE OF GRAY IMAGE
34
BINARIZE FINGERPRINT IMAGE
36
SKELETONIZE BINARIZED FINGERPRINT IMAGE
40
GENERATE TOPOLOGICAL REPRESENTATION OF BINARIZED FINGERPRINT IMAGE
44
POSTPROCESSING: REDUCE NOISE
50

FIG.1

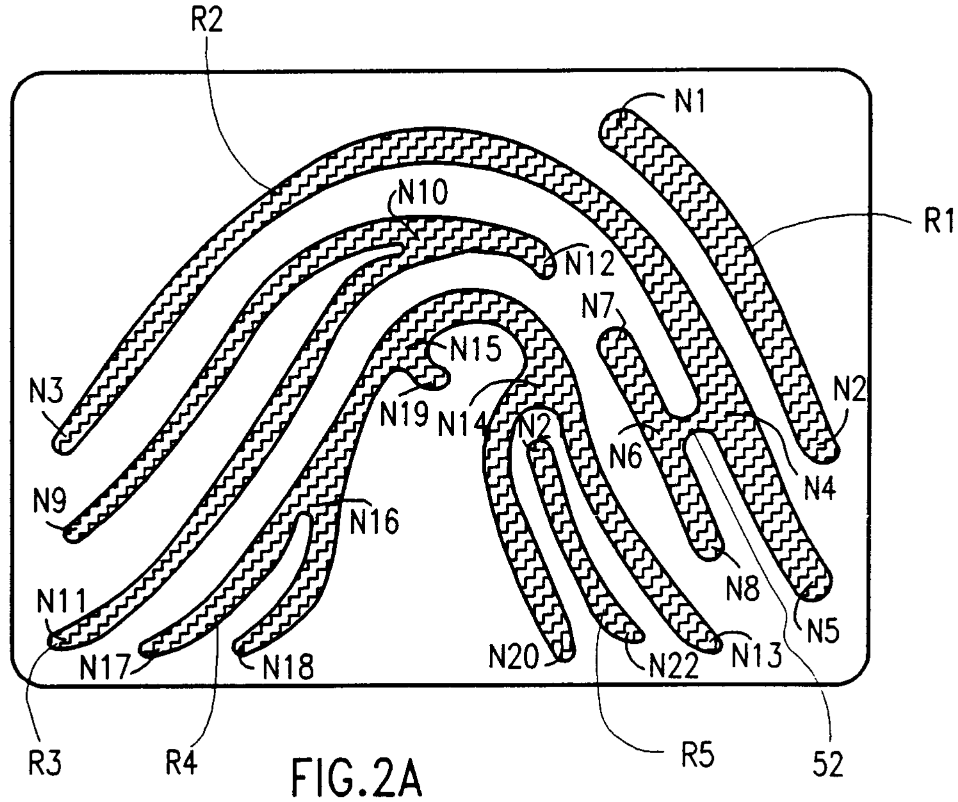
R2
N1
R1
N10
N12
N7
N15
N3
N19
N14
N2
N2
N6
N4
N9
N16
N8
N11
N5
N17
N18
N20
N22
N13
R3
R4
R5
52

FIG.2A

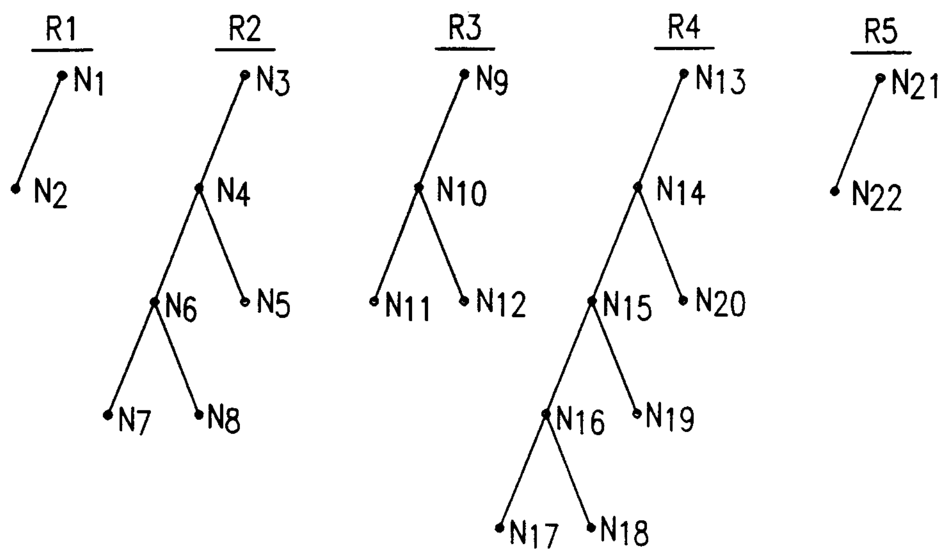
R1
N1
N2
R2
N3
N4
N5
N6
N7
N8
R3
N9
N10
N11
N12
R4
N13
N14
N15
N16
N17
N18
N19
N20
R5
N21
N22

FIG.2B

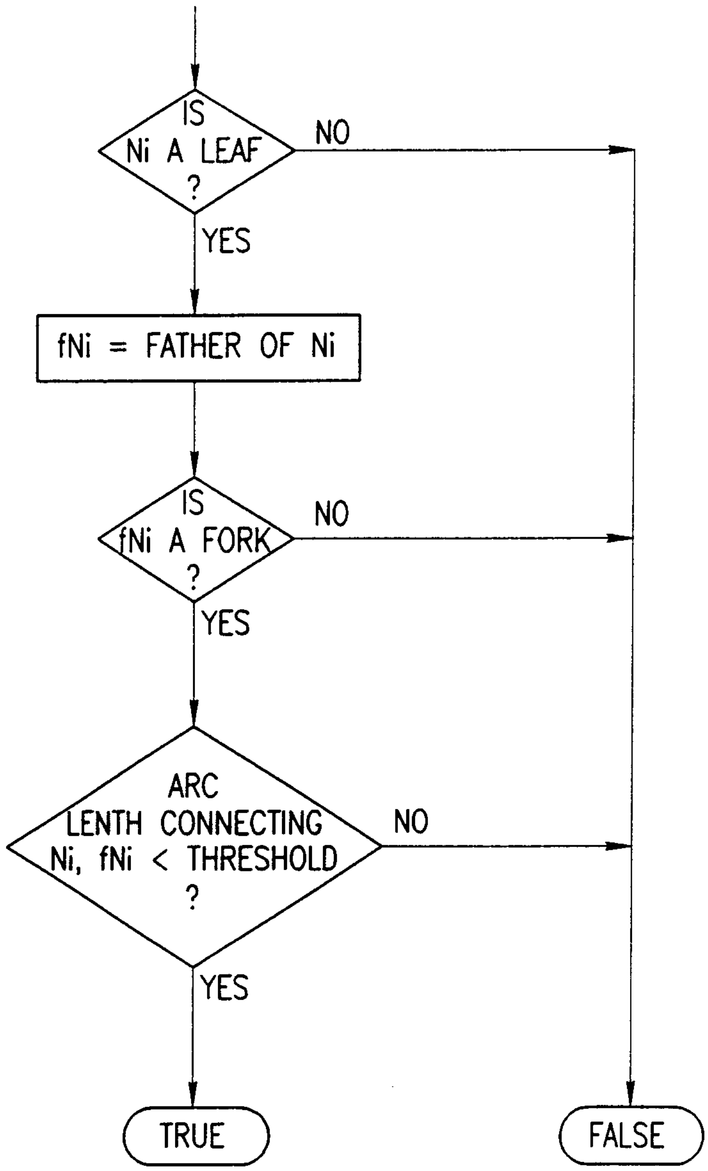
IS
Ni A LEAF
?
NO
YES
fNi = FATHER OF Ni
IS
fNi A FORK
?
NO
YES
ARC
LENTH CONNECTING
Ni, fNi < THRESHOLD
?
NO
YES
TRUE
FALSE

FIG.14

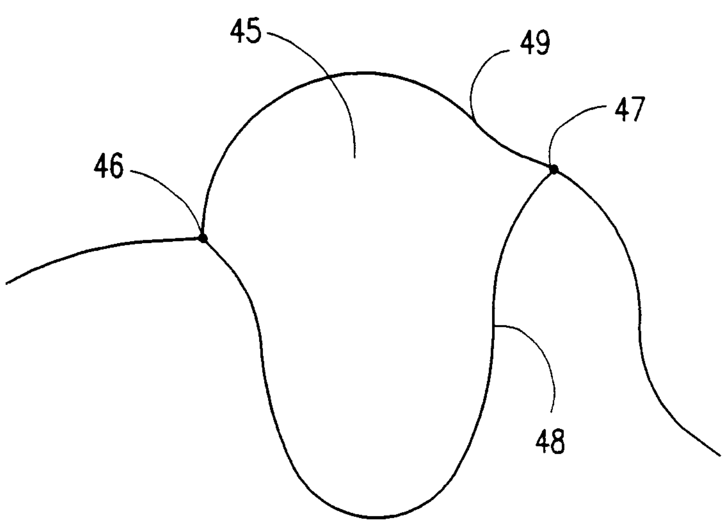
45
49
47
46
48

FIG.3

FIG.4

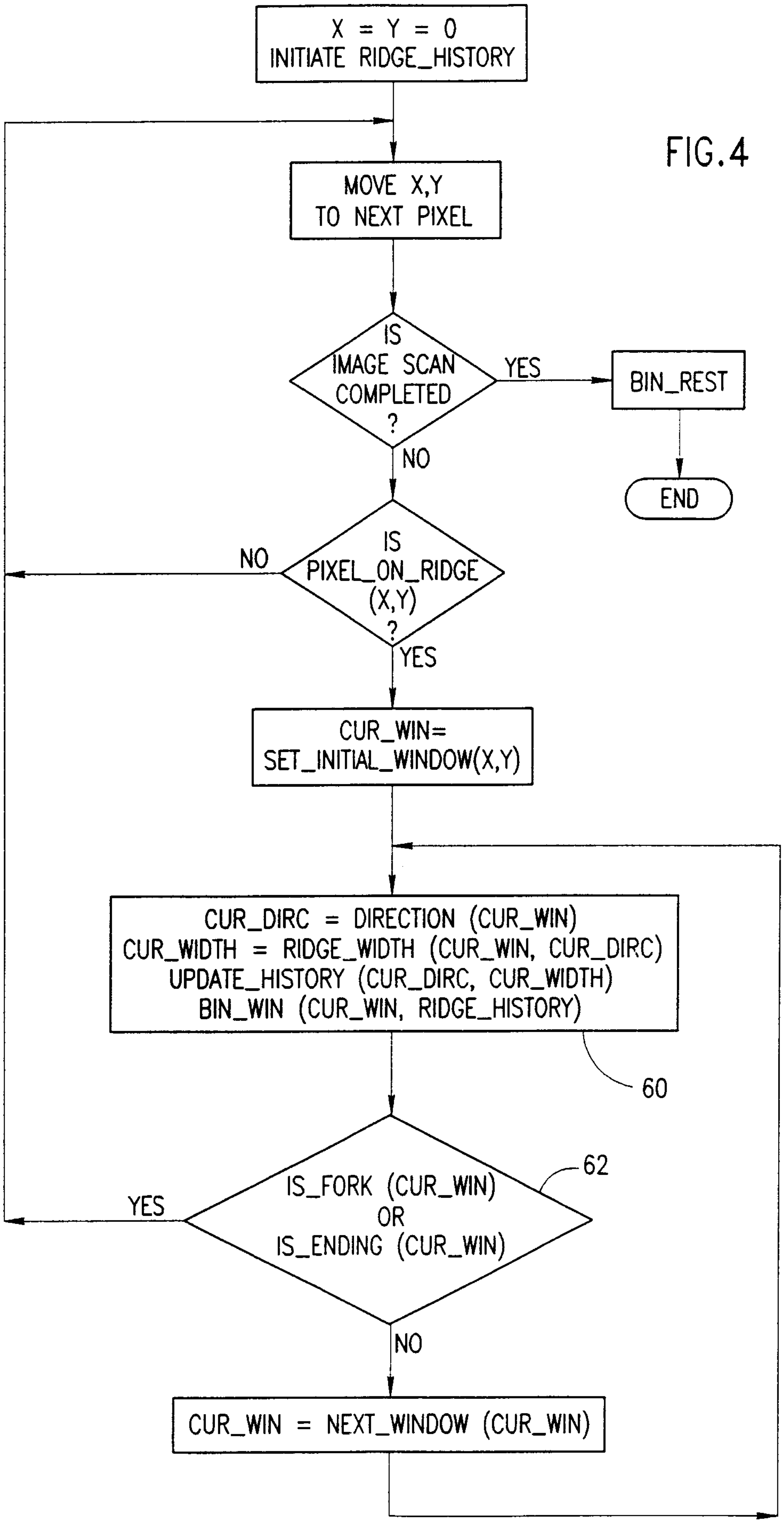
X = Y = 0
INITIATE RIDGE_HISTORY
MOVE X,Y
TO NEXT PIXEL
IS
IMAGE SCAN
COMPLETED
?
YES
BIN_REST
END
NO
IS
PIXEL_ON_RIDGE
(X,Y)
?
NO
YES
CUR_WIN=
SET_INITIAL_WINDOW(X,Y)
CUR_DIRC = DIRECTION (CUR_WIN)
CUR_WIDTH = RIDGE_WIDTH (CUR_WIN, CUR_DIRC)
UPDATE_HISTORY (CUR_DIRC, CUR_WIDTH)
BIN_WIN (CUR_WIN, RIDGE_HISTORY)
60
62
IS_FORK (CUR_WIN)
OR
IS_ENDING (CUR_WIN)
YES
NO
CUR_WIN = NEXT_WINDOW (CUR_WIN)

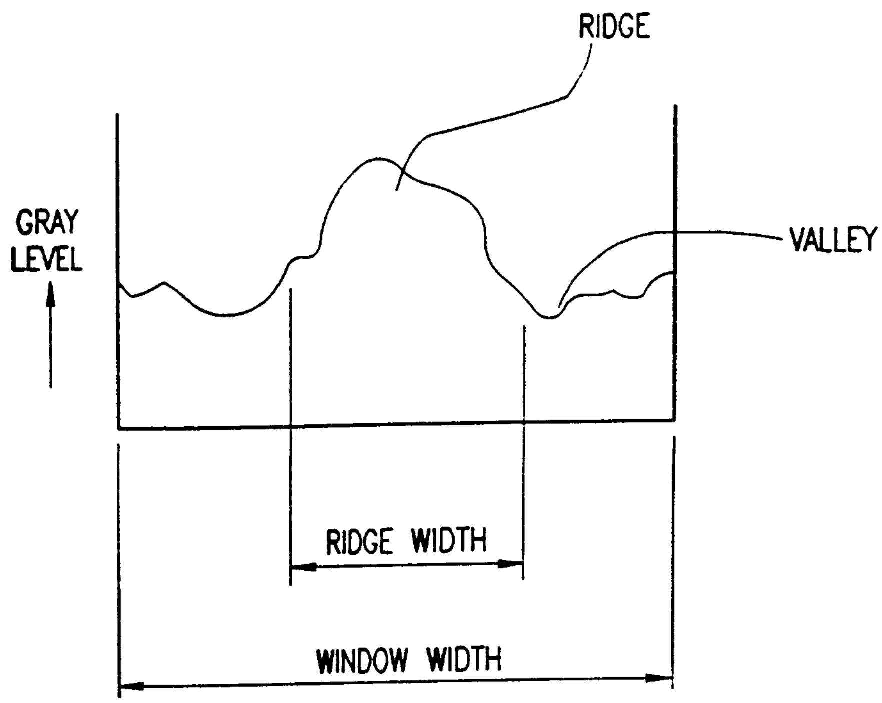


FIG.5

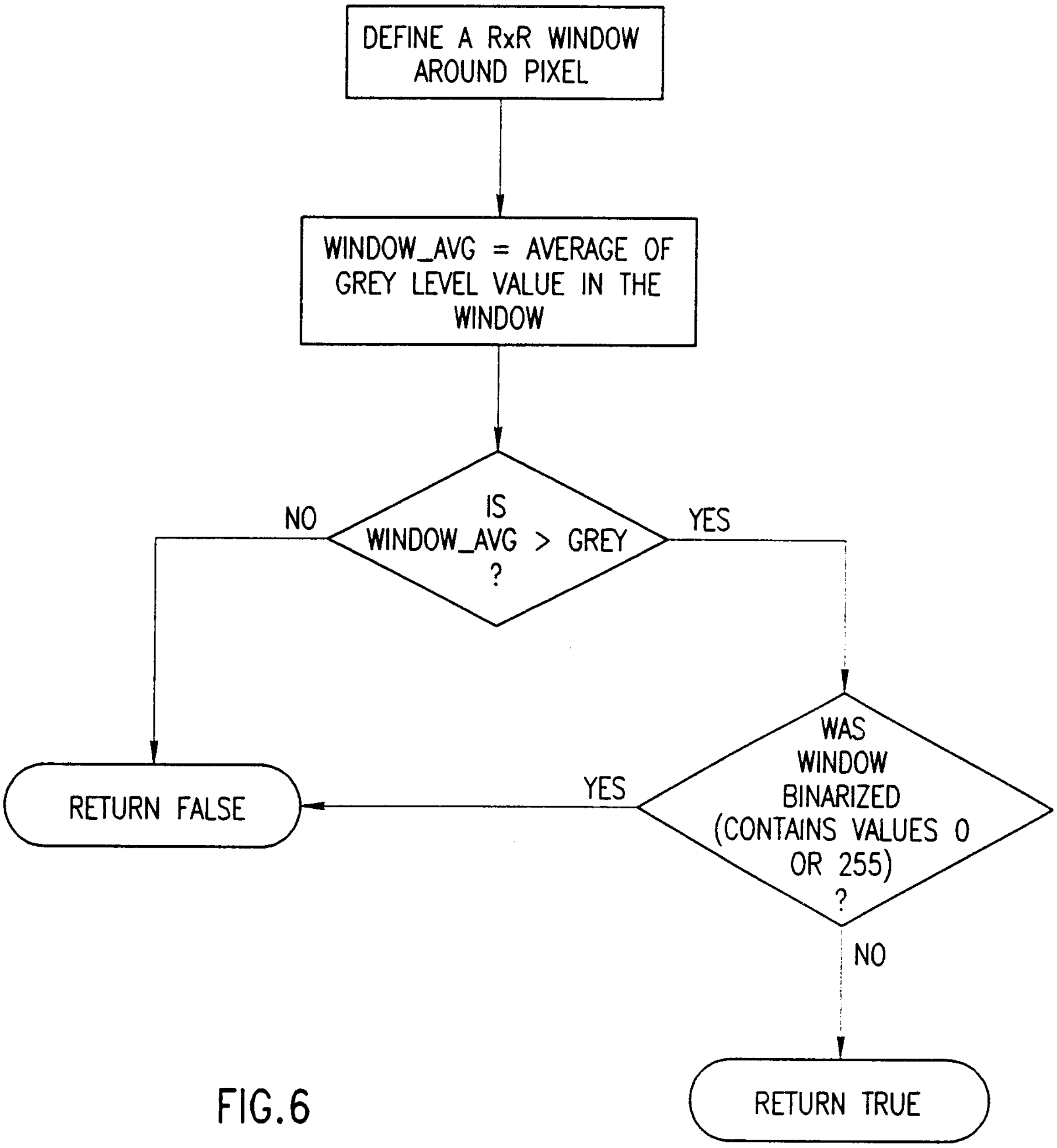
DEFINE A RxR WINDOW AROUND PIXEL
WINDOW_AVG = AVERAGE OF GREY LEVEL VALUE IN THE WINDOW
IS WINDOW_AVG > GREY ?
NO
YES
WAS WINDOW BINARIZED (CONTAINS VALUES 0 OR 255) ?
YES
NO
RETURN FALSE
RETURN TRUE

FIG.6

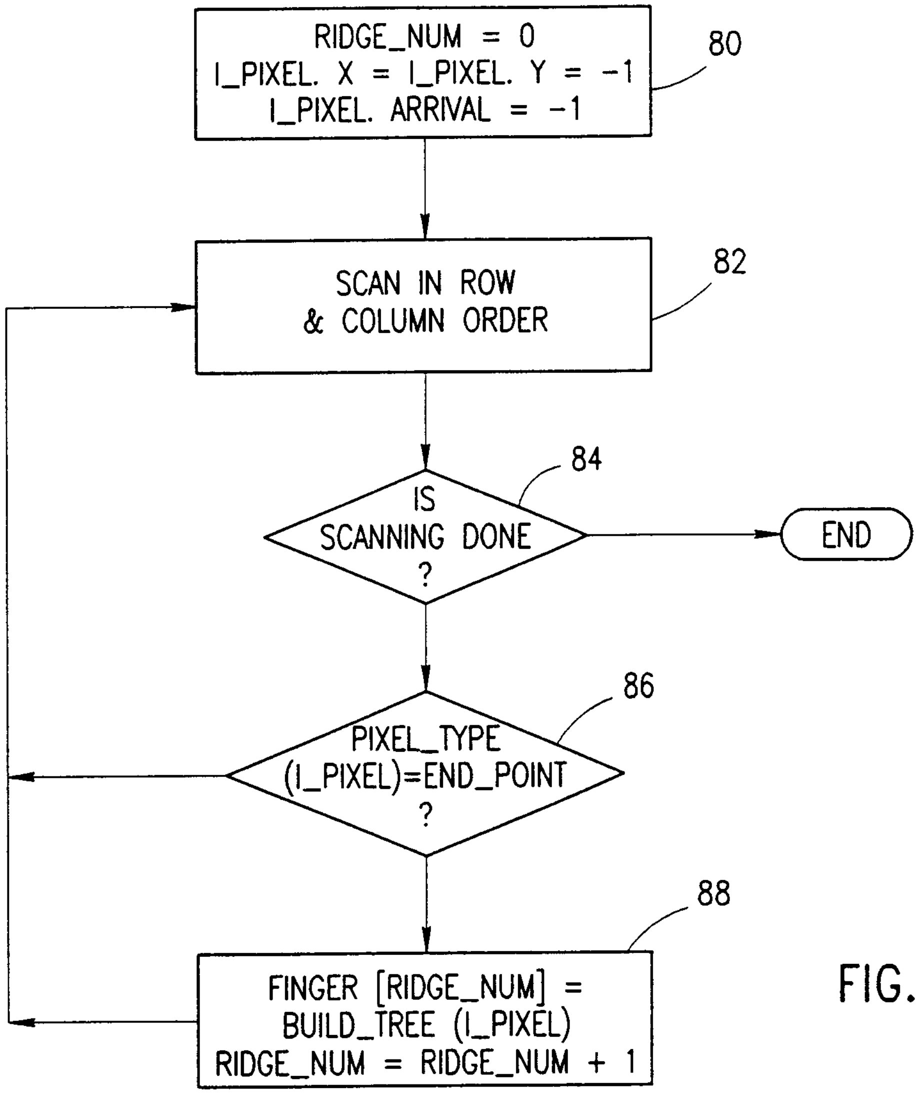
RIDGE_NUM = 0
I_PIXEL. X = I_PIXEL. Y = -1
I_PIXEL. ARRIVAL = -1
80
SCAN IN ROW & COLUMN ORDER
82
IS SCANNING DONE ?
84
END
PIXEL_TYPE (I_PIXEL)=END_POINT ?
86
FINGER [RIDGE_NUM] = BUILD_TREE (I_PIXEL)
RIDGE_NUM = RIDGE_NUM + 1
88

FIG.7

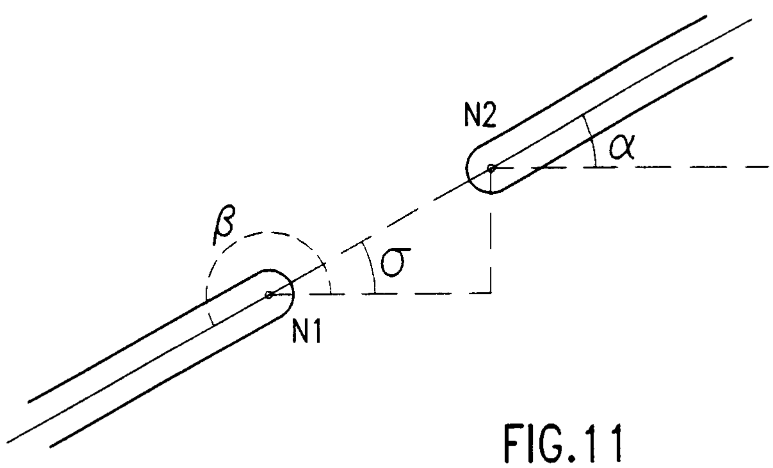
N2
α
β
σ
N1

FIG.11

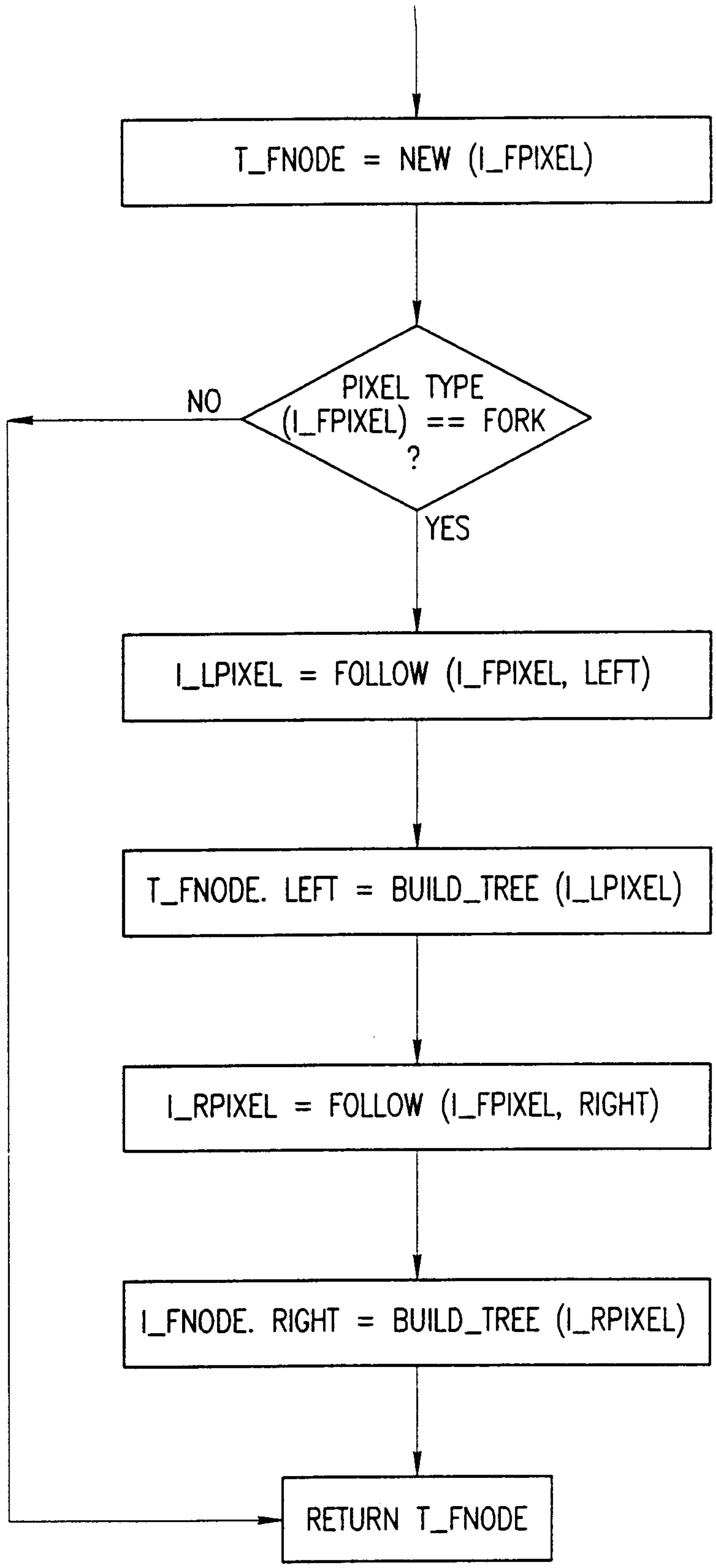
T_FNODE = NEW (I_FPIXEL)
PIXEL TYPE (I_FPIXEL) == FORK ?
NO
YES
I_LPIXEL = FOLLOW (I_FPIXEL, LEFT)
T_FNODE. LEFT = BUILD_TREE (I_LPIXEL)
I_RPIXEL = FOLLOW (I_FPIXEL, RIGHT)
I_FNODE. RIGHT = BUILD_TREE (I_RPIXEL)
RETURN T_FNODE

FIG.8

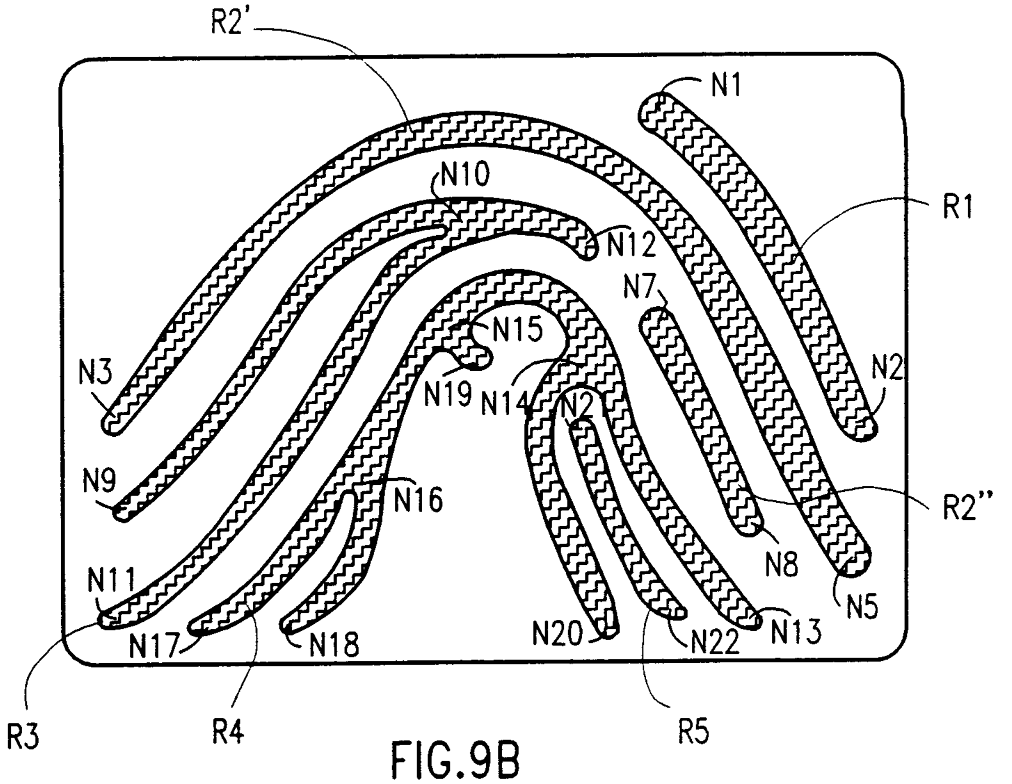

R2'
N1
R1
N10
N12
N7
N15
N3
N2
N19
N14
N2
N9
R2"
N16
N8
N11
N5
N17
N18
N20
N22
N13
R3
R4
R5


FIG.9B

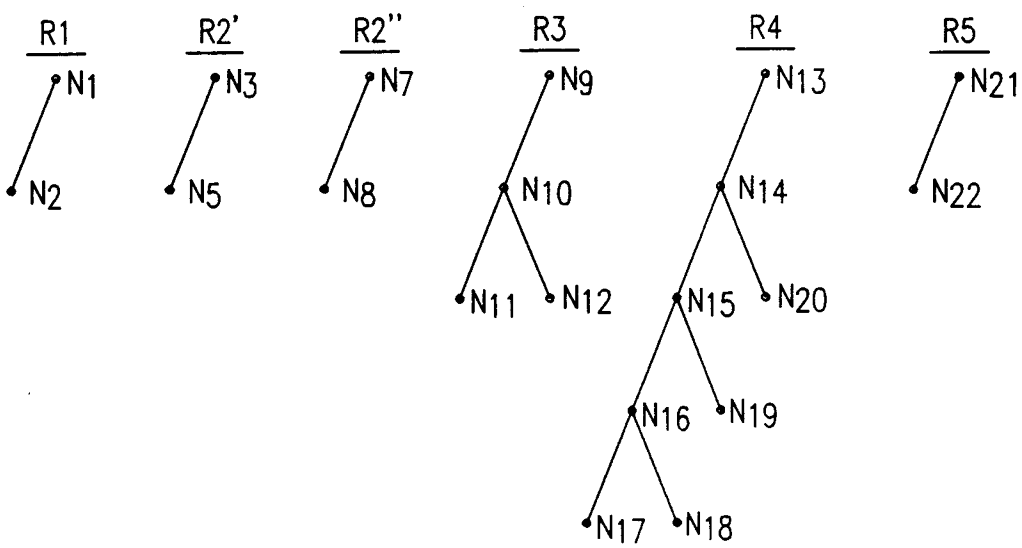

R1
N1
N2
R2'
N3
N5
R2"
N7
N8
R3
N9
N10
N11
N12
R4
N13
N14
N15
N20
N16
N19
N17
N18
R5
N21
N22


FIG.9A

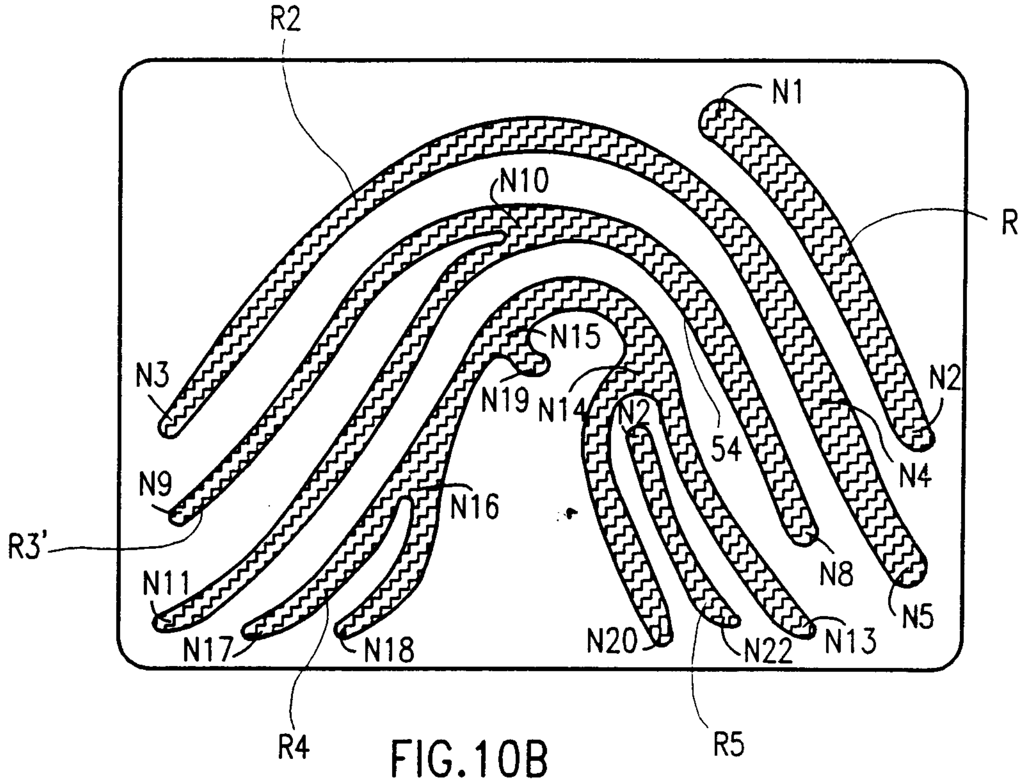


FIG.10B

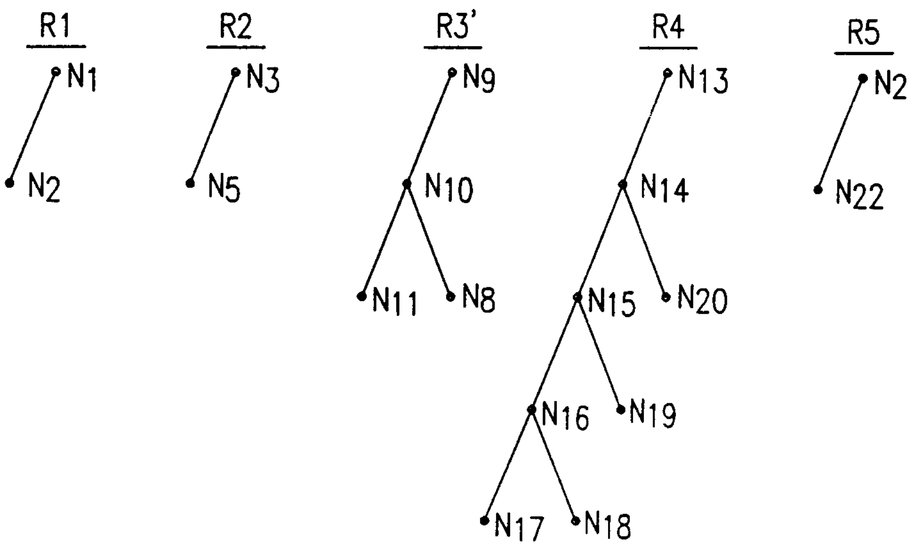


FIG.10A

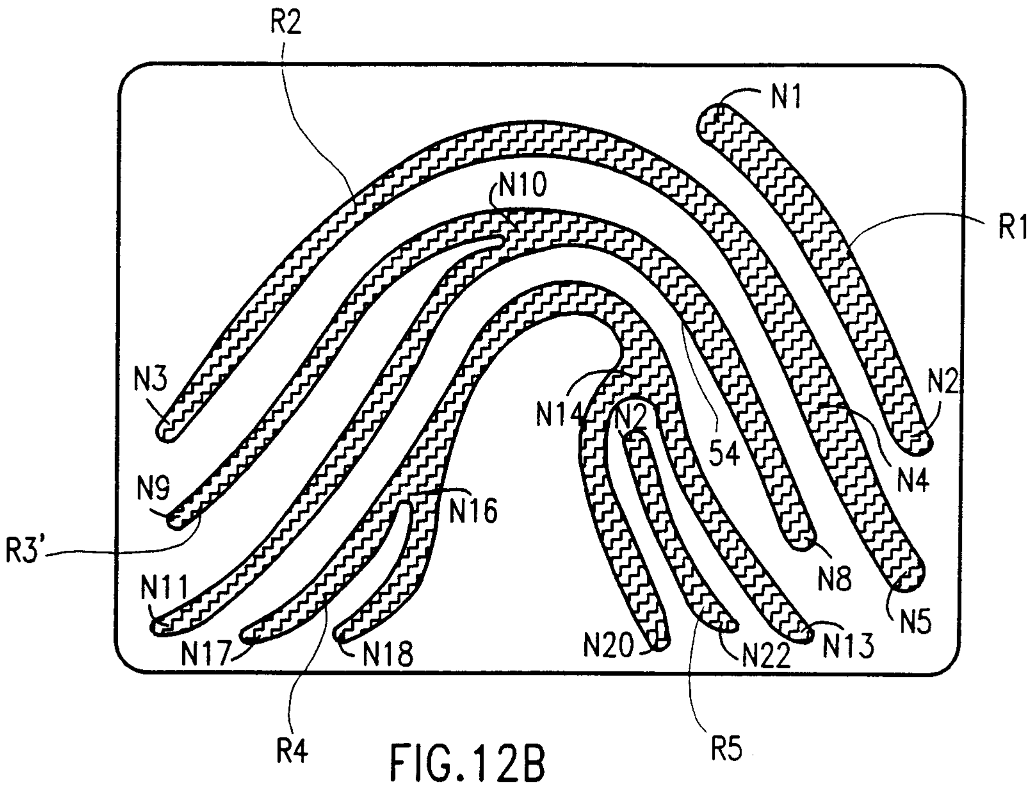


FIG.12B

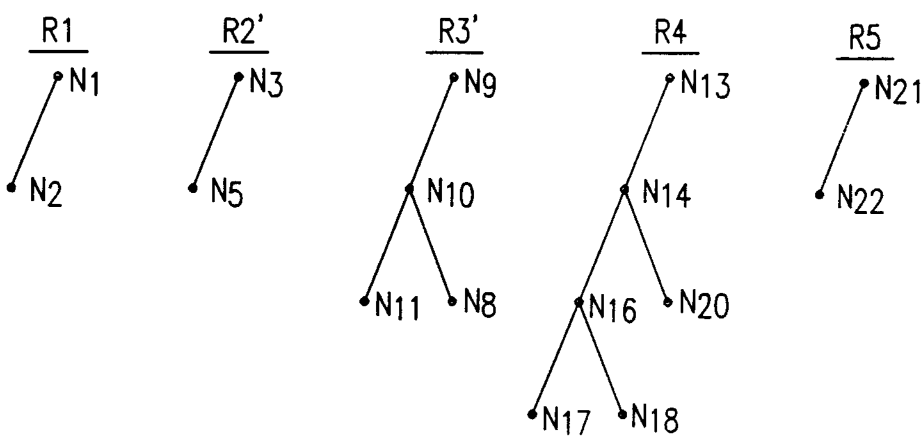


FIG.12A

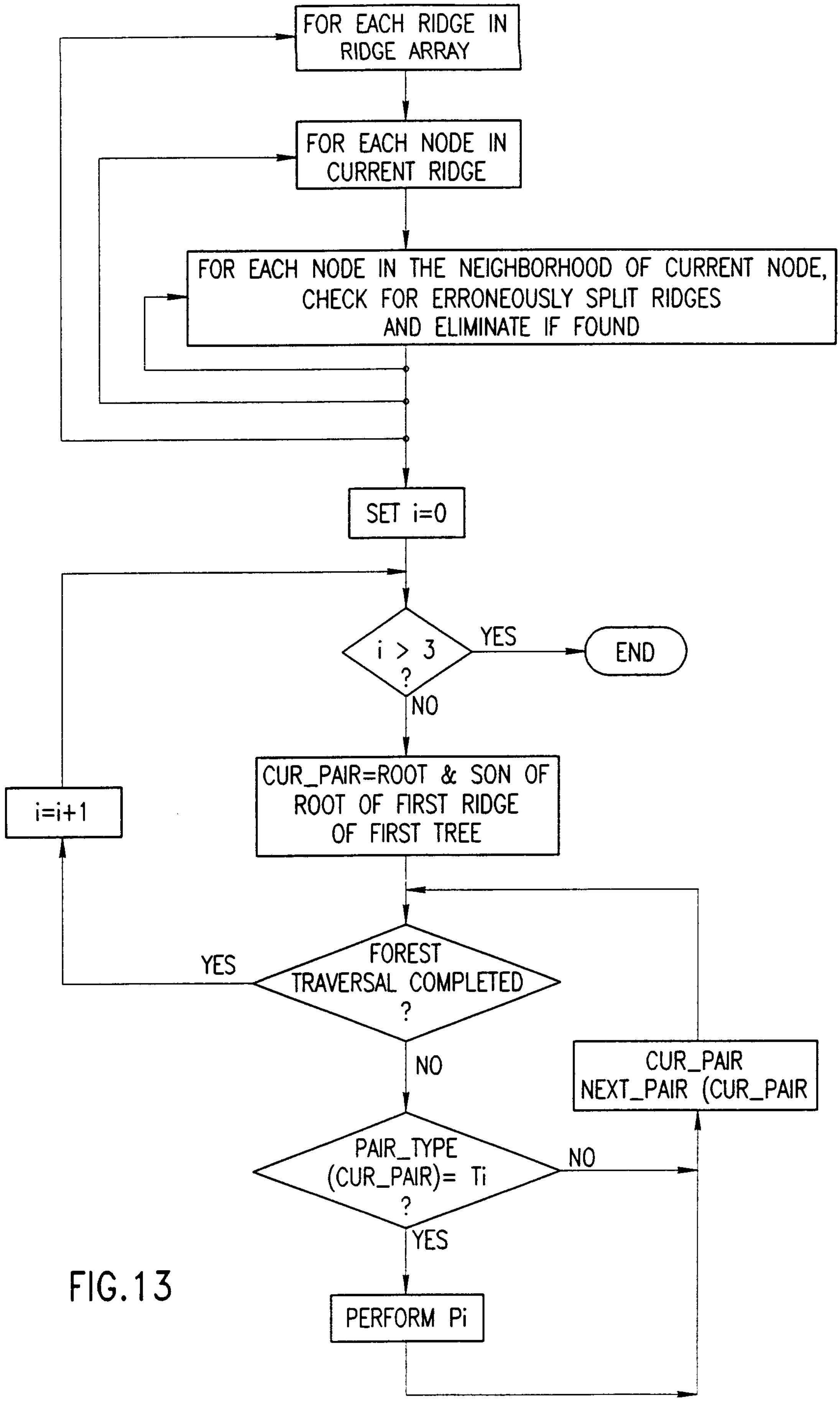
FOR EACH RIDGE IN RIDGE ARRAY
FOR EACH NODE IN CURRENT RIDGE
FOR EACH NODE IN THE NEIGHBORHOOD OF CURRENT NODE, CHECK FOR ERRONEOUSLY SPLIT RIDGES AND ELIMINATE IF FOUND
SET i=0
i > 3 ?
YES
END
NO
CUR_PAIR=ROOT & SON OF ROOT OF FIRST RIDGE OF FIRST TREE
i=i+1
YES
FOREST TRAVERSAL COMPLETED ?
NO
CUR_PAIR NEXT_PAIR (CUR_PAIR
PAIR_TYPE (CUR_PAIR)= Ti ?
NO
YES
PERFORM Pi

FIG.13

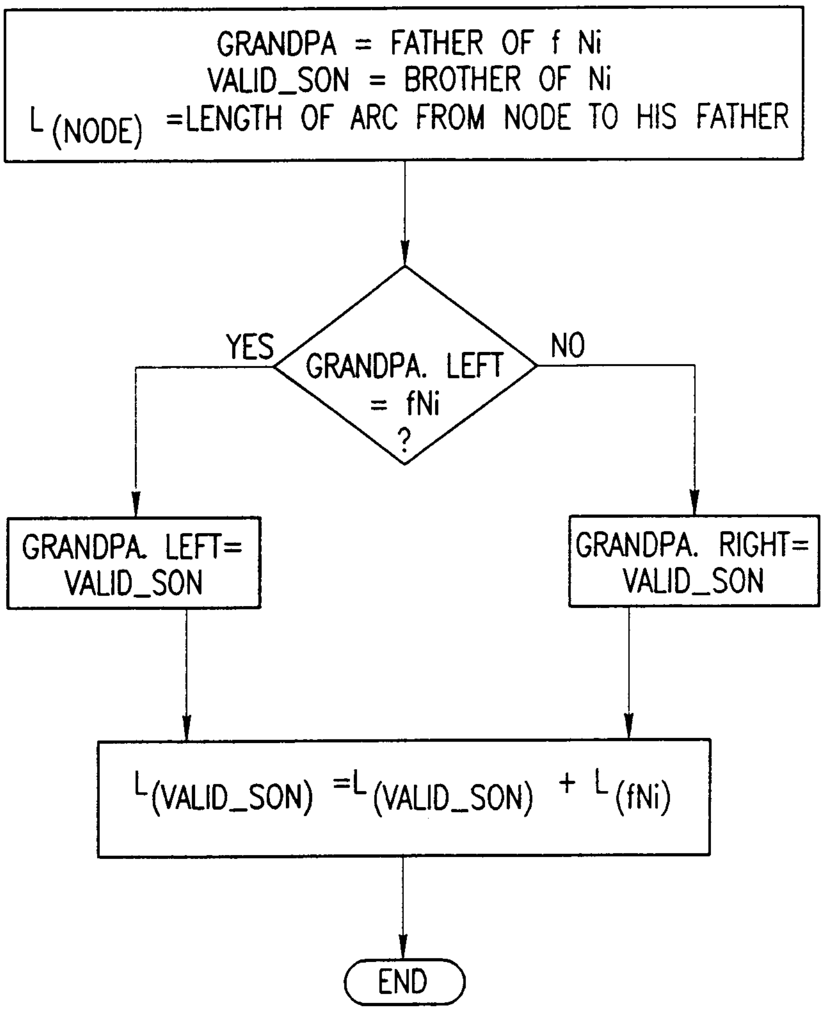
GRANDPA = FATHER OF f Ni
VALID_SON = BROTHER OF Ni
L (NODE) =LENGTH OF ARC FROM NODE TO HIS FATHER
YES
GRANDPA. LEFT = fNi ?
NO
GRANDPA. LEFT= VALID_SON
GRANDPA. RIGHT= VALID_SON
L(VALID_SON) =L(VALID_SON) + L(fNi)
END

FIG.15

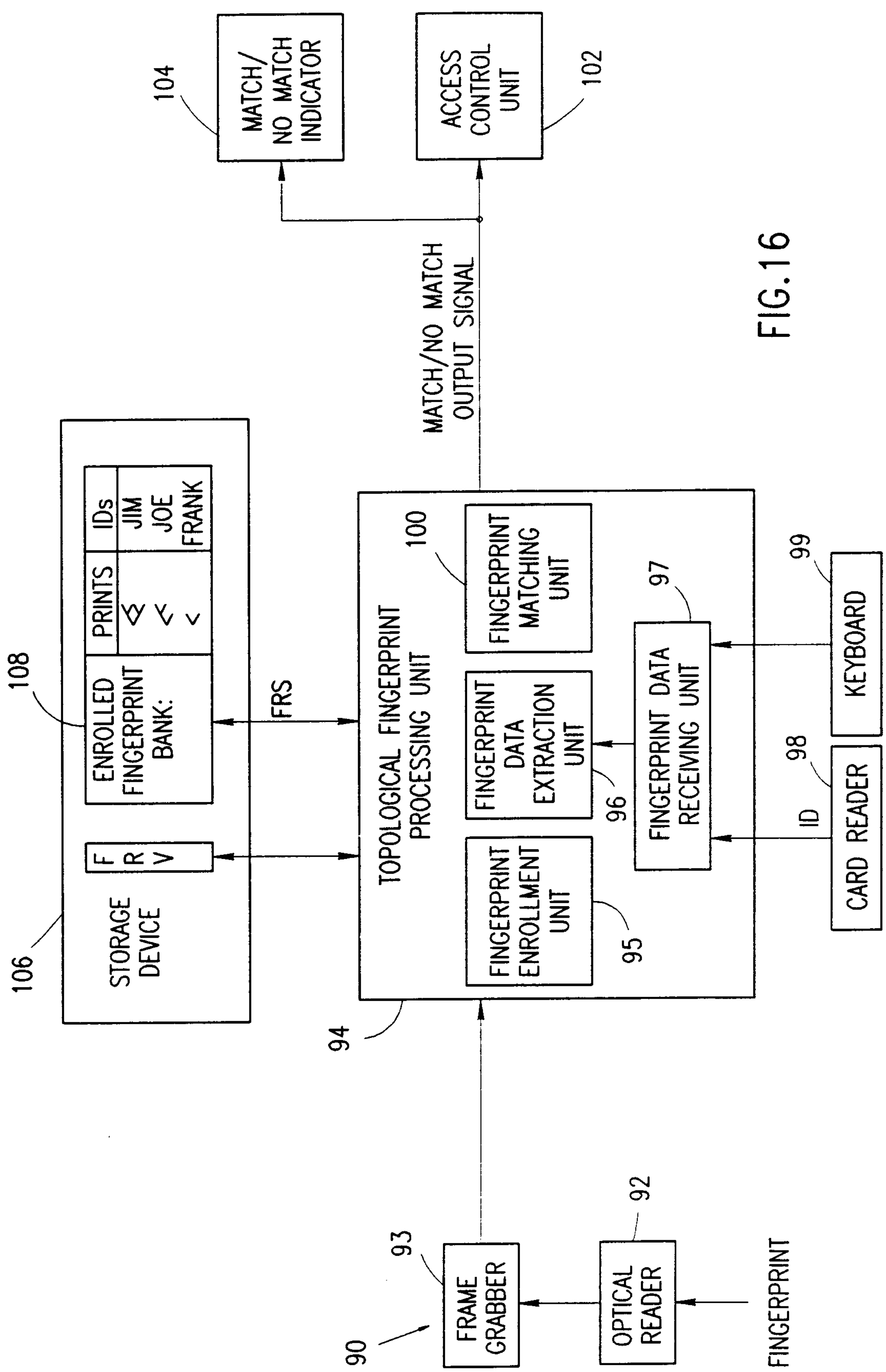
MATCH/
NO MATCH
INDICATOR
104
ACCESS
CONTROL
UNIT
102
MATCH/NO MATCH
OUTPUT SIGNAL
STORAGE
DEVICE
106
F
R
V
ENROLLED
FINGERPRINT
BANK:
108
PRINTS
IDs
JIM
JOE
FRANK
FRS
TOPOLOGICAL FINGERPRINT
PROCESSING UNIT
94
FINGERPRINT
ENROLLMENT
UNIT
95
FINGERPRINT
DATA
EXTRACTION
UNIT
96
FINGERPRINT
MATCHING
UNIT
100
FINGERPRINT DATA
RECEIVING UNIT
97
CARD READER
98
ID
KEYBOARD
99
FRAME
GRABBER
93
90
OPTICAL
READER
92
FINGERPRINT

FIG.16

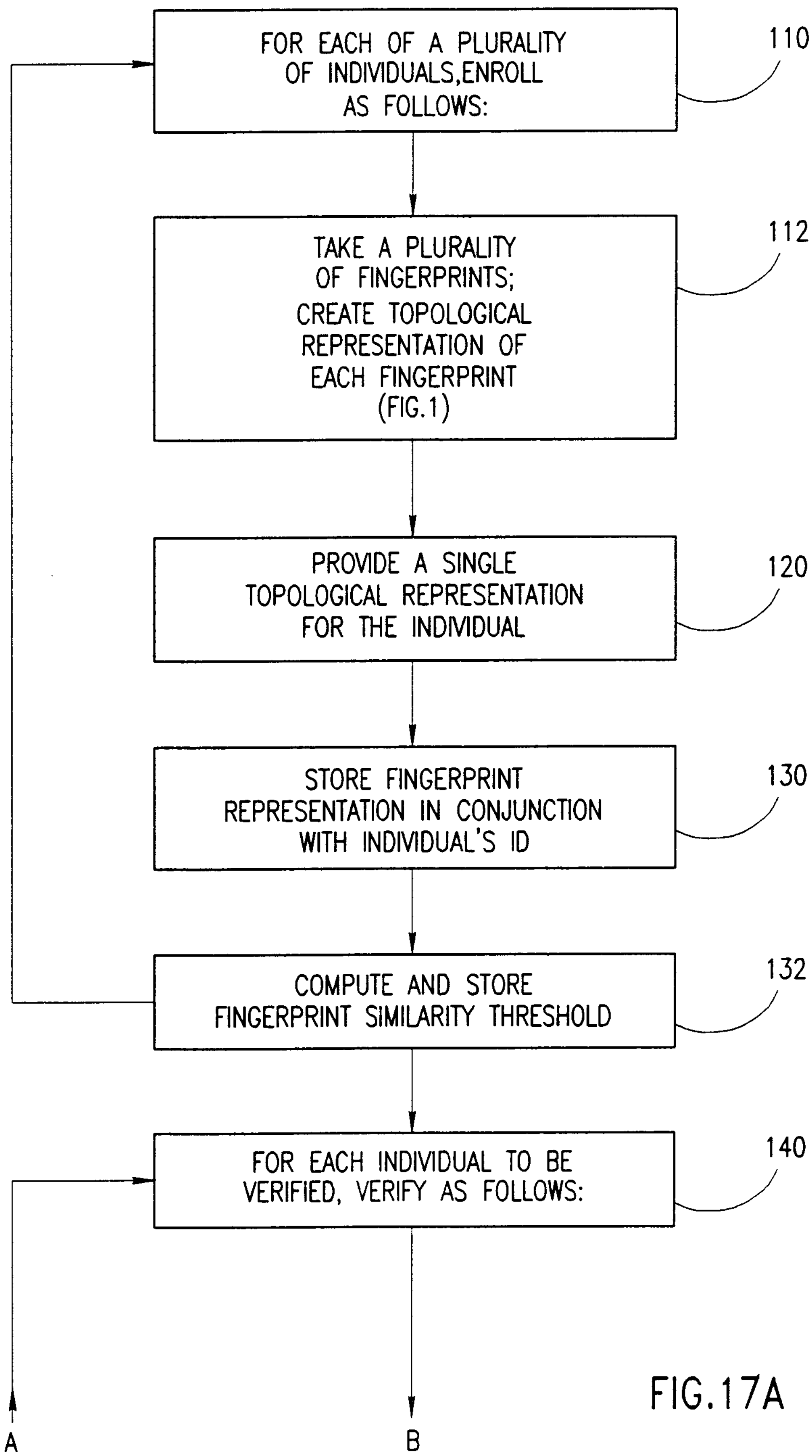

FOR EACH OF A PLURALITY OF INDIVIDUALS,ENROLL AS FOLLOWS:
110
TAKE A PLURALITY OF FINGERPRINTS; CREATE TOPOLOGICAL REPRESENTATION OF EACH FINGERPRINT (FIG.1)
112
PROVIDE A SINGLE TOPOLOGICAL REPRESENTATION FOR THE INDIVIDUAL
120
STORE FINGERPRINT REPRESENTATION IN CONJUNCTION WITH INDIVIDUAL'S ID
130
COMPUTE AND STORE FINGERPRINT SIMILARITY THRESHOLD
132
FOR EACH INDIVIDUAL TO BE VERIFIED, VERIFY AS FOLLOWS:
140
A
B


FIG.17A

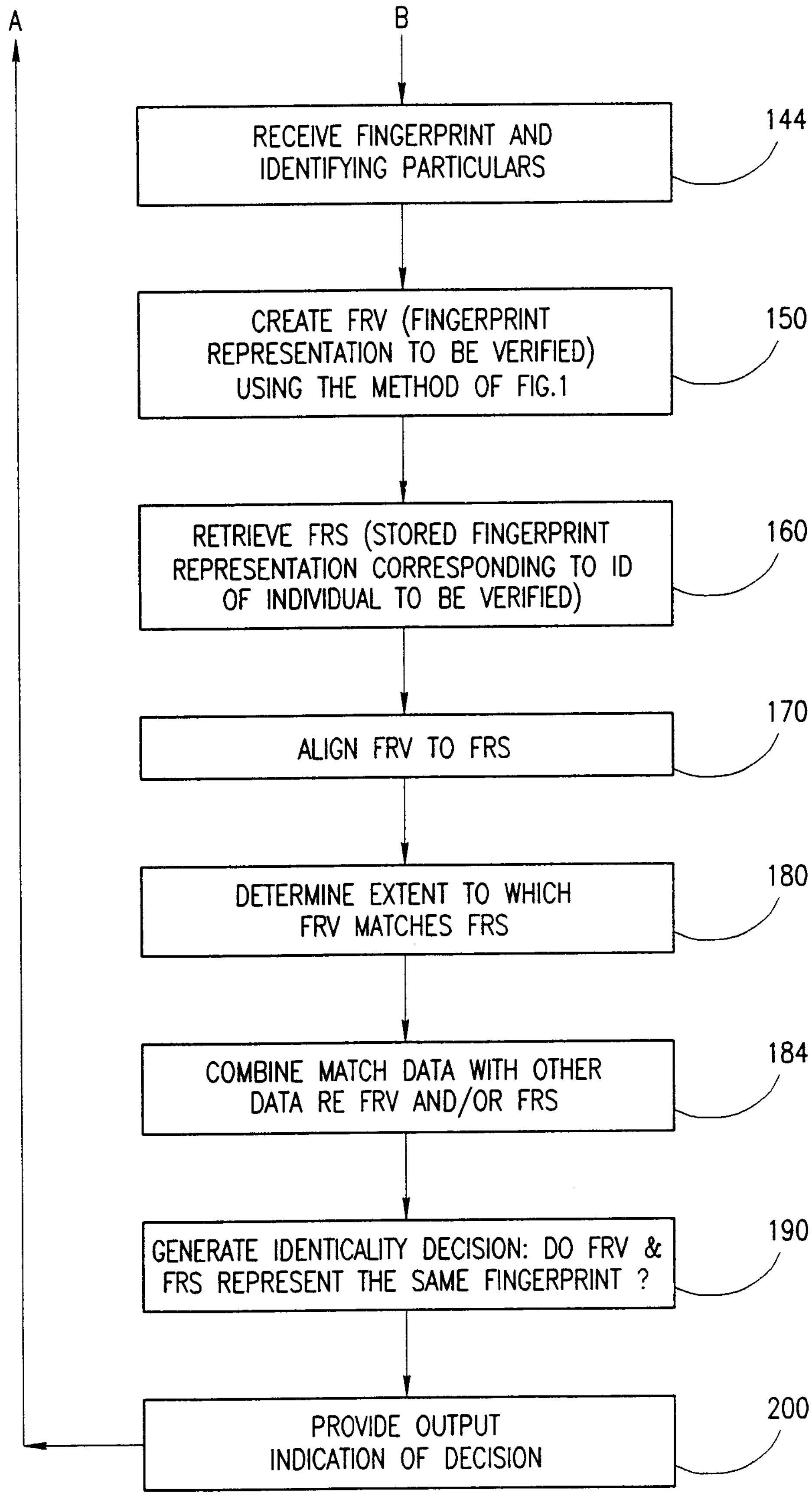
A
B
RECEIVE FINGERPRINT AND IDENTIFYING PARTICULARS
144
CREATE FRV (FINGERPRINT REPRESENTATION TO BE VERIFIED) USING THE METHOD OF FIG.1
150
RETRIEVE FRS (STORED FINGERPRINT REPRESENTATION CORRESPONDING TO ID OF INDIVIDUAL TO BE VERIFIED)
160
ALIGN FRV TO FRS
170
DETERMINE EXTENT TO WHICH FRV MATCHES FRS
180
COMBINE MATCH DATA WITH OTHER DATA RE FRV AND/OR FRS
184
GENERATE IDENTICALITY DECISION: DO FRV & FRS REPRESENT THE SAME FINGERPRINT ?
190
PROVIDE OUTPUT INDICATION OF DECISION
200

FIG.17B

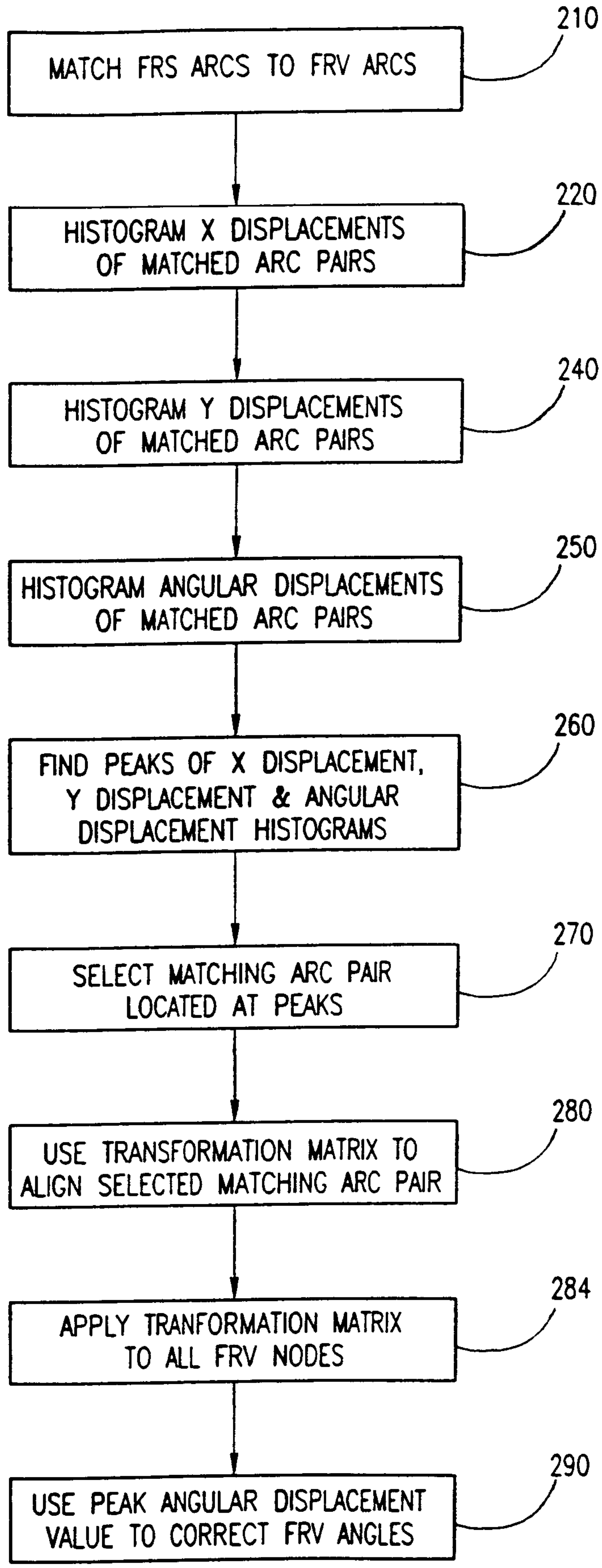
MATCH FRS ARCS TO FRV ARCS
210
HISTOGRAM X DISPLACEMENTS OF MATCHED ARC PAIRS
220
HISTOGRAM Y DISPLACEMENTS OF MATCHED ARC PAIRS
240
HISTOGRAM ANGULAR DISPLACEMENTS OF MATCHED ARC PAIRS
250
FIND PEAKS OF X DISPLACEMENT, Y DISPLACEMENT & ANGULAR DISPLACEMENT HISTOGRAMS
260
SELECT MATCHING ARC PAIR LOCATED AT PEAKS
270
USE TRANSFORMATION MATRIX TO ALIGN SELECTED MATCHING ARC PAIR
280
APPLY TRANFORMATION MATRIX TO ALL FRV NODES
284
USE PEAK ANGULAR DISPLACEMENT VALUE TO CORRECT FRV ANGLES
290

FIG.18

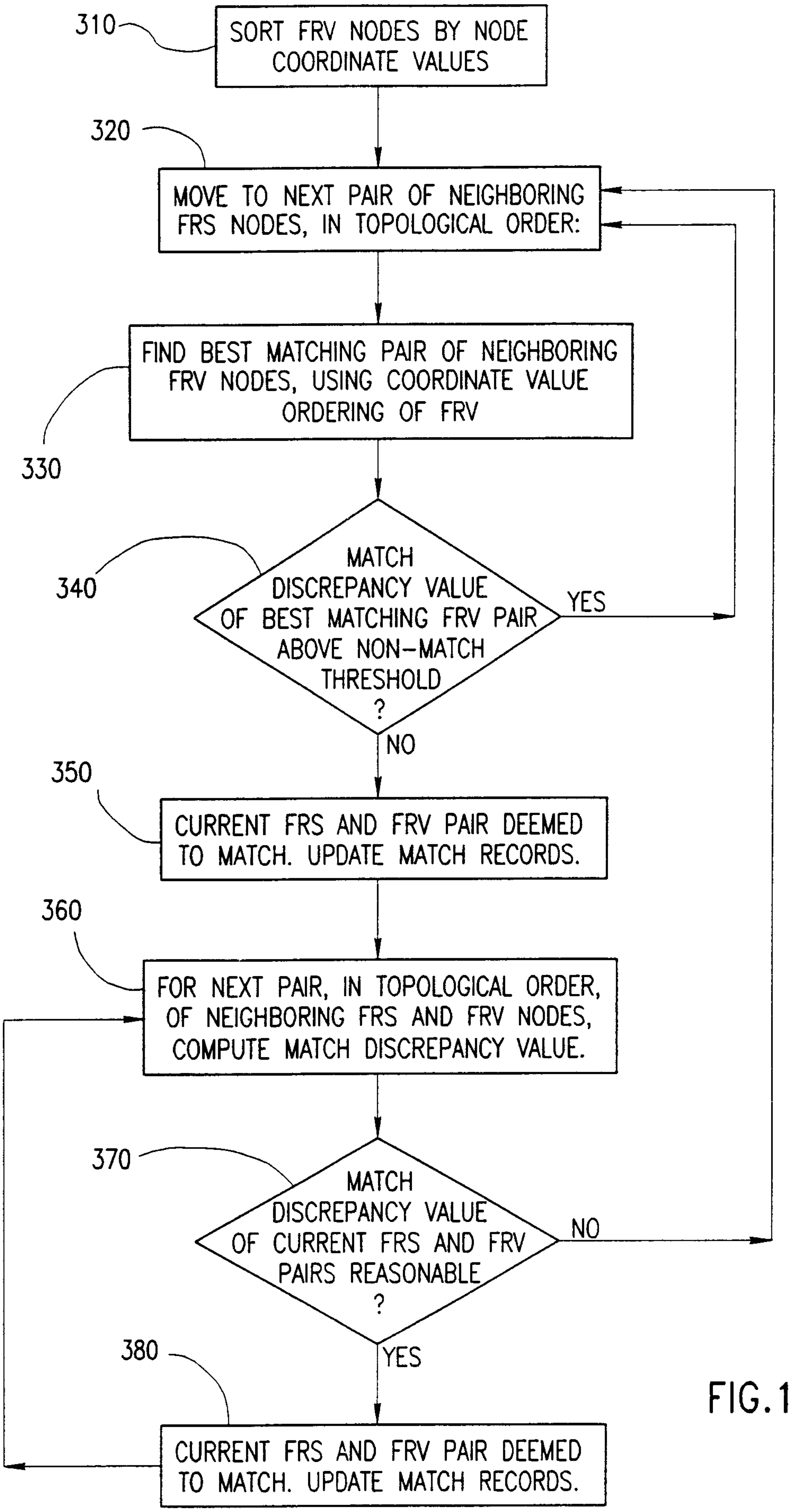
310
SORT FRV NODES BY NODE COORDINATE VALUES
320
MOVE TO NEXT PAIR OF NEIGHBORING FRS NODES, IN TOPOLOGICAL ORDER:
FIND BEST MATCHING PAIR OF NEIGHBORING FRV NODES, USING COORDINATE VALUE ORDERING OF FRV
330
340
MATCH DISCREPANCY VALUE OF BEST MATCHING FRV PAIR ABOVE NON-MATCH THRESHOLD ?
YES
NO
350
CURRENT FRS AND FRV PAIR DEEMED TO MATCH. UPDATE MATCH RECORDS.
360
FOR NEXT PAIR, IN TOPOLOGICAL ORDER, OF NEIGHBORING FRS AND FRV NODES, COMPUTE MATCH DISCREPANCY VALUE.
370
MATCH DISCREPANCY VALUE OF CURRENT FRS AND FRV PAIRS REASONABLE ?
NO
YES
380
CURRENT FRS AND FRV PAIR DEEMED TO MATCH. UPDATE MATCH RECORDS.

FIG.19

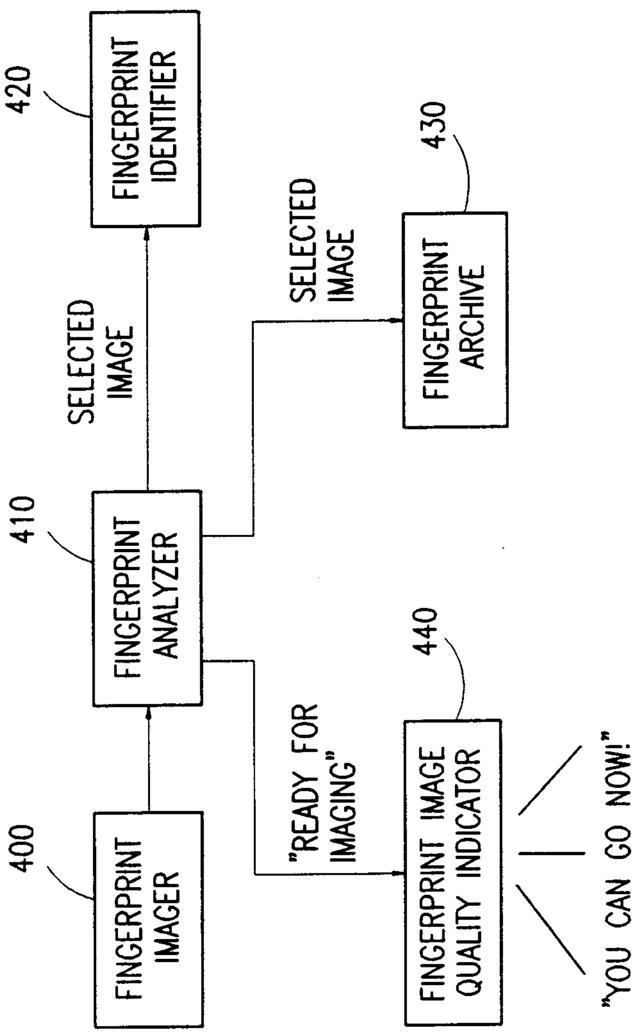
400
FINGERPRINT IMAGER
410
FINGERPRINT ANALYZER
420
FINGERPRINT IDENTIFIER
SELECTED IMAGE
SELECTED IMAGE
430
FINGERPRINT ARCHIVE
"READY FOR IMAGING"
440
FINGERPRINT IMAGE QUALITY INDICATOR
"YOU CAN GO NOW!"

FIG.20

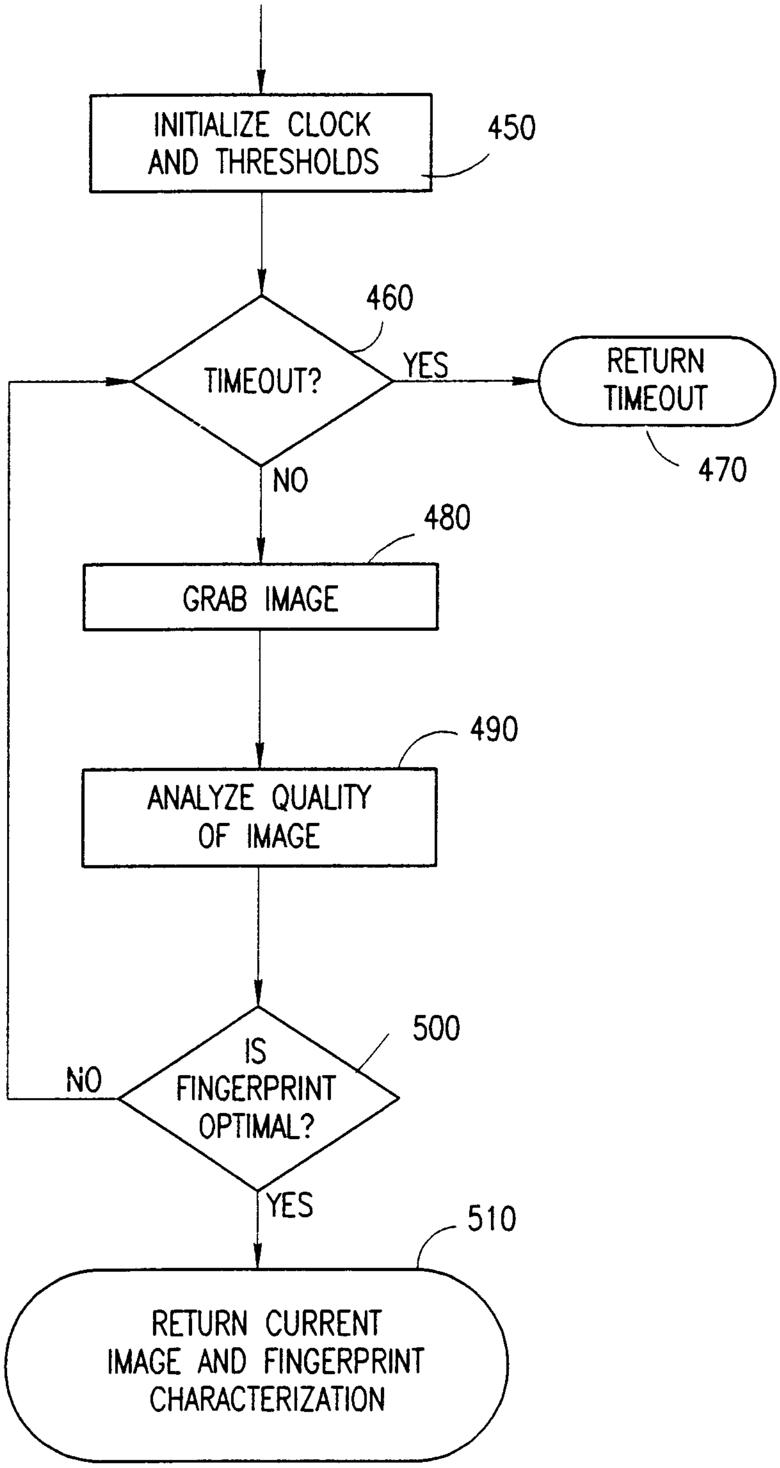
INITIALIZE CLOCK AND THRESHOLDS
450
460
TIMEOUT?
YES
RETURN TIMEOUT
470
NO
480
GRAB IMAGE
490
ANALYZE QUALITY OF IMAGE
500
IS FINGERPRINT OPTIMAL?
NO
YES
510
RETURN CURRENT IMAGE AND FINGERPRINT CHARACTERIZATION

FIG.21

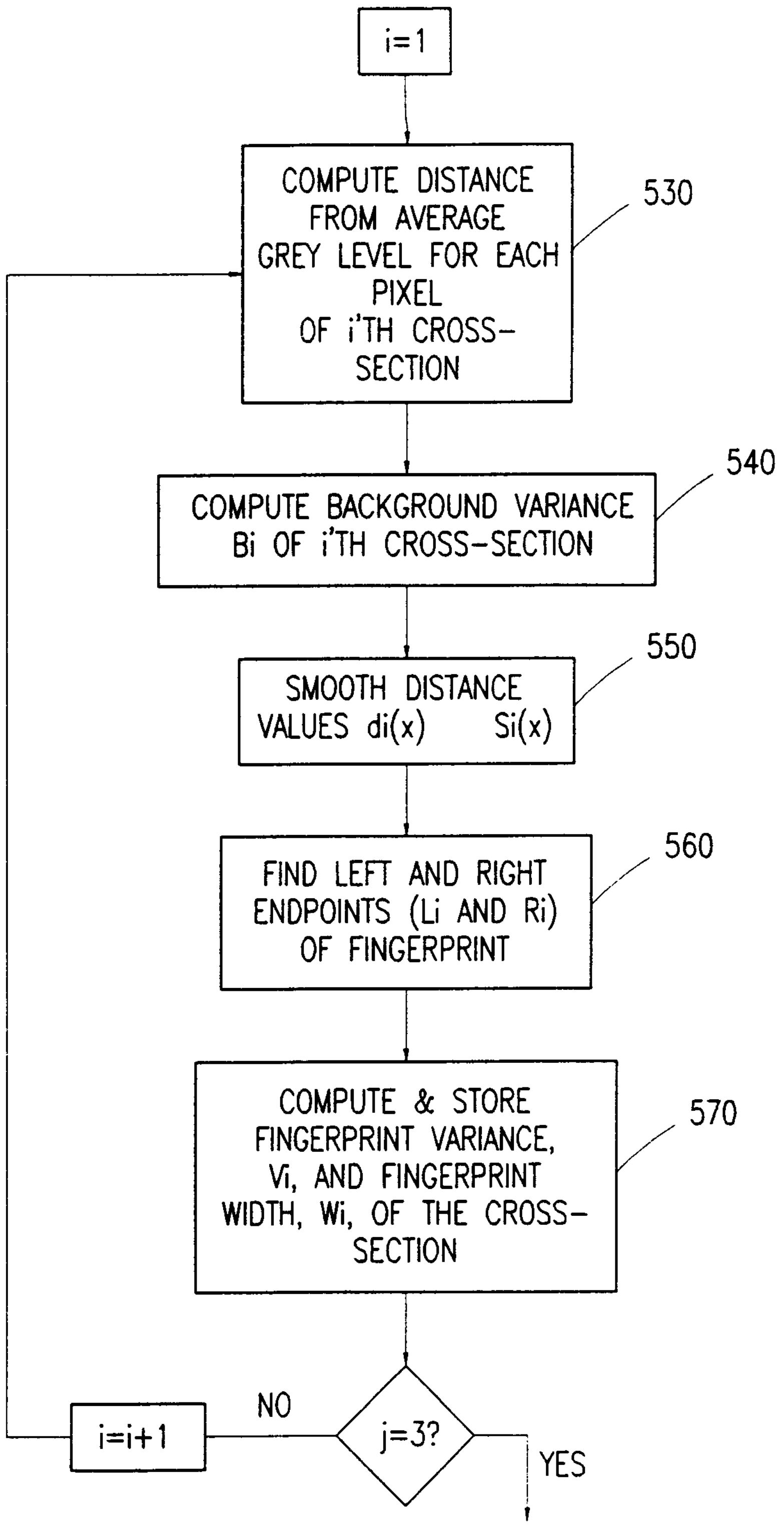
i=1
COMPUTE DISTANCE FROM AVERAGE GREY LEVEL FOR EACH PIXEL OF i'TH CROSS-SECTION
530
COMPUTE BACKGROUND VARIANCE Bi OF i'TH CROSS-SECTION
540
SMOOTH DISTANCE VALUES di(x) Si(x)
550
FIND LEFT AND RIGHT ENDPOINTS (Li AND Ri) OF FINGERPRINT
560
COMPUTE & STORE FINGERPRINT VARIANCE, Vi, AND FINGERPRINT WIDTH, Wi, OF THE CROSS-SECTION
570
i=i+1
NO
j=3?
YES

FIG.22

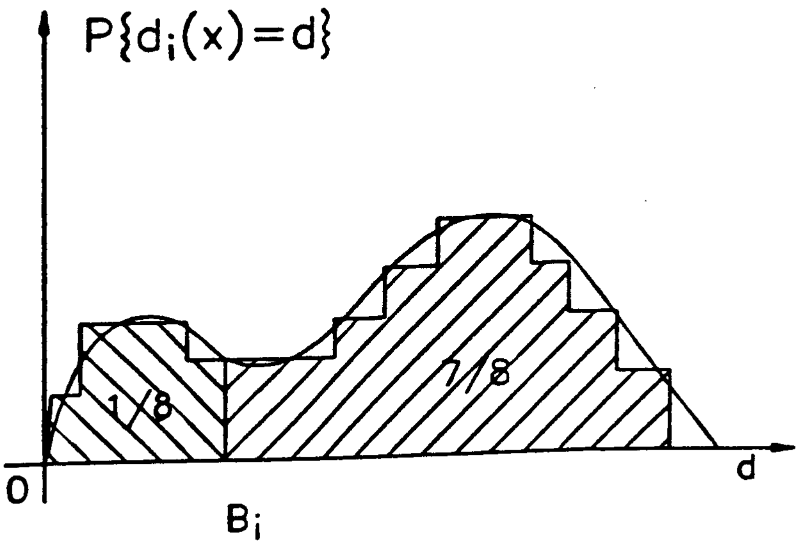


FIG. 23A

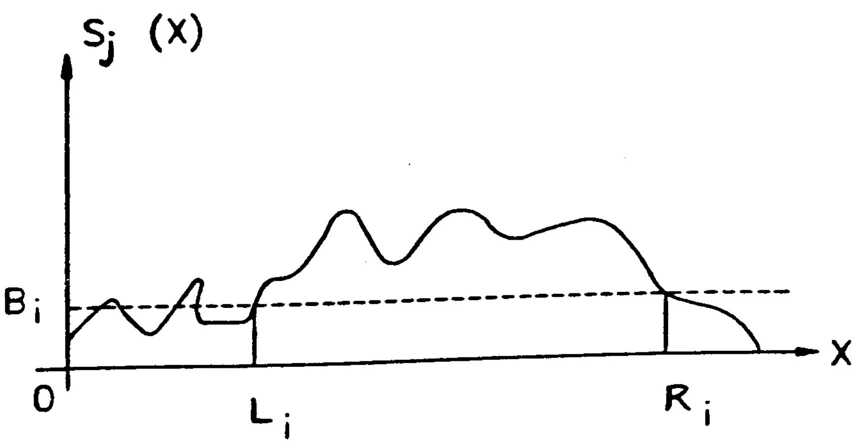


FIG. 23B

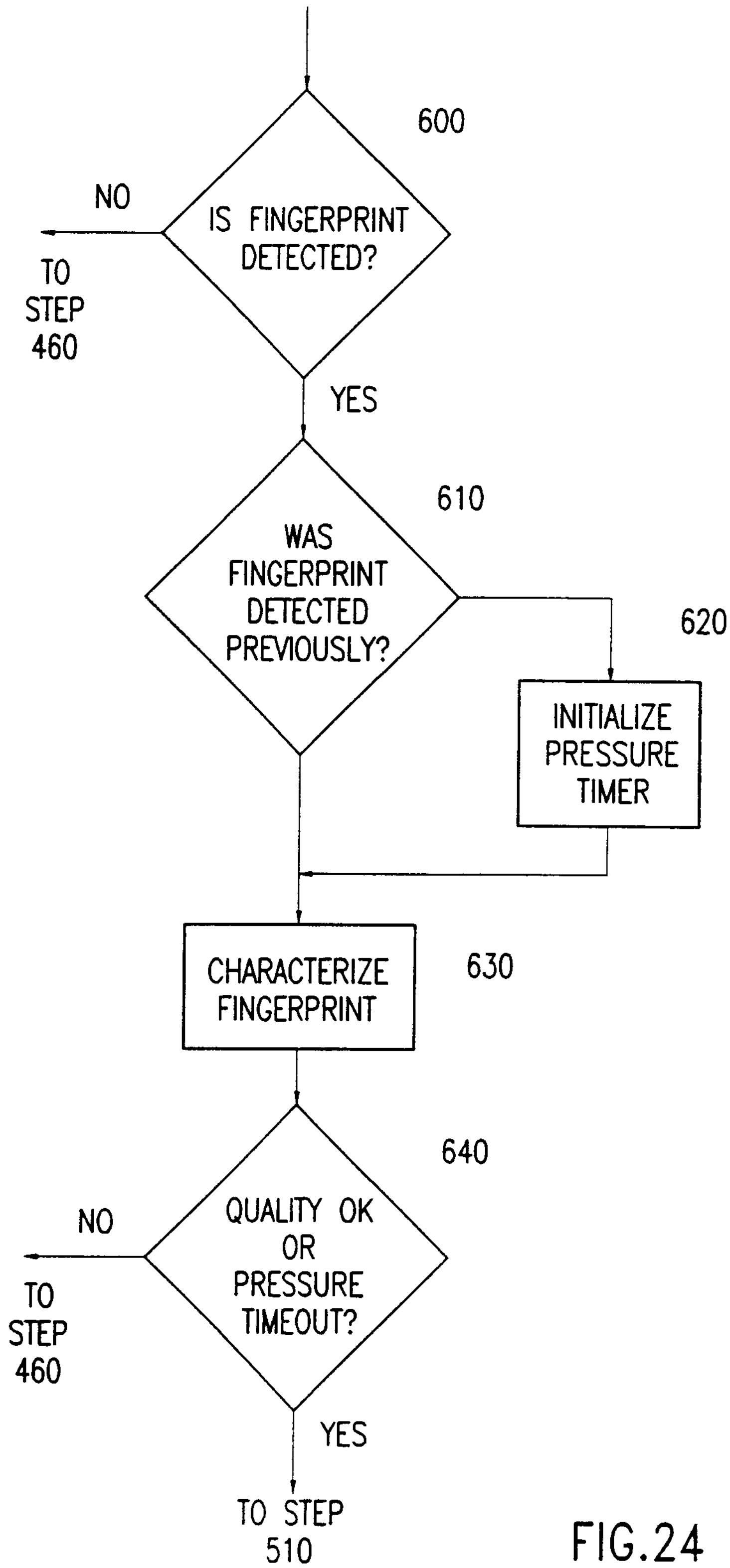
600
IS FINGERPRINT DETECTED?
NO
TO STEP 460
YES
610
WAS FINGERPRINT DETECTED PREVIOUSLY?
620
INITIALIZE PRESSURE TIMER
CHARACTERIZE FINGERPRINT
630
640
QUALITY OK OR PRESSURE TIMEOUT?
NO
TO STEP 460
YES
TO STEP 510

FIG.24

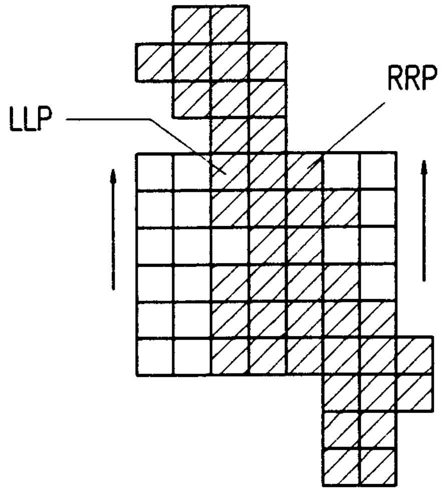


FIG.25A

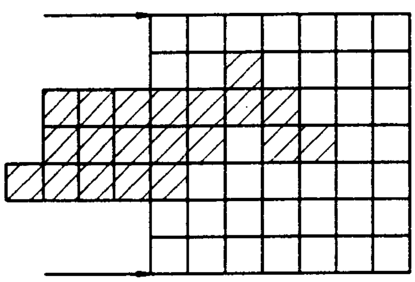

FIG.25B

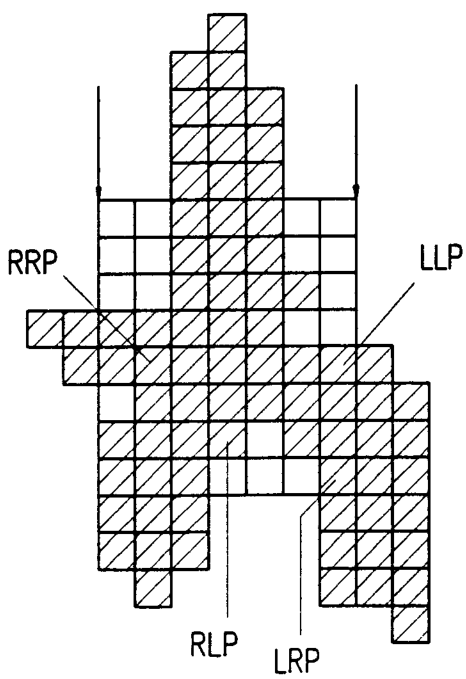


FIG.25C

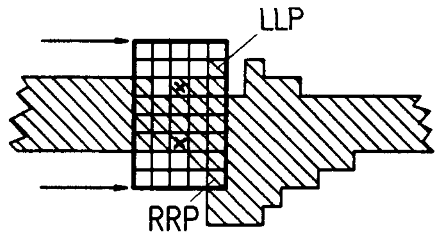


FIG.26A

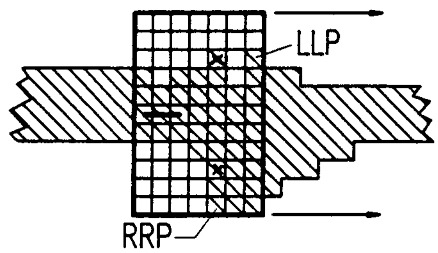


FIG.26B

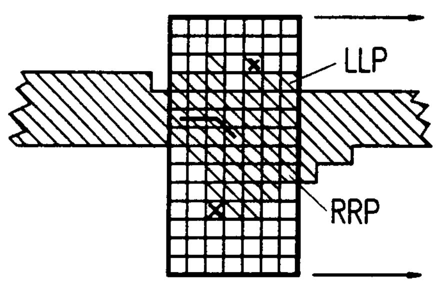


FIG.26C

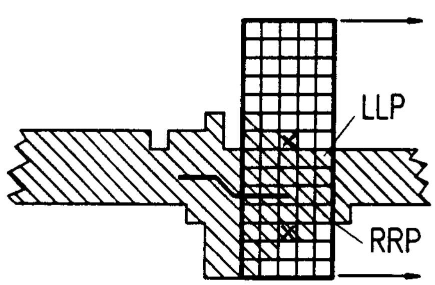


FIG.26D